(19) Europäisches Patentamt European Patent Office Office européen des brevets

(11) **EP 3 598 710 B1**

(12) **EUROPEAN PATENT SPECIFICATION**

(45) Date of publication and mention of the grant of the patent:
**22.05.2024 Bulletin 2024/21**

(21) Application number: **18863010.7**

(22) Date of filing: **29.09.2018**

(51) International Patent Classification (IPC):
**H04L 27/26** (2006.01)

(52) Cooperative Patent Classification (CPC):
**H04L 27/2602; H04L 5/00; H04L 27/26; H04L 27/2613;** H04L 5/0048; H04L 5/0053; H04L 27/262

(86) International application number:
**PCT/CN2018/108546**

(87) International publication number:
**WO 2019/062885 (04.04.2019 Gazette 2019/14)**

(54) **SIGNAL PROCESSING METHOD AND APPARATUS BASED ON SEQUENCE**

SIGNALVERARBEITUNGSVERFAHREN UND -VORRICHTUNG BASIEREND AUF EINER SEQUENZ

PROCÉDÉ ET APPAREIL DE TRAITEMENT DE SIGNAL BASÉS SUR UNE SÉQUENCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2017 CN 201710911459**

(43) Date of publication of application:
**22.01.2020 Bulletin 2020/04**

(73) Proprietor: **Huawei Technologies Co., Ltd. Longgang District Shenzhen, Guangdong 518129 (CN)**

(72) Inventors:
• **QU, Bingyu**
  **Shenzhen**
  **Guangdong 518129 (CN)**
• **SUN, Hao**
  **Shenzhen**
  **Guangdong 518129 (CN)**

(74) Representative: **Maiwald GmbH Elisenhof Elisenstraße 3 80335 München (DE)**

(56) References cited:
**WO-A1-2013/020565    CN-A- 102 246 485 CN-A- 103 312 447**

• **INTERDIGITAL INC: "Sequence design for 1-symbol short-PUCCH of up to 2 bits", 3GPP DRAFT; R1-1716478 SEQUENCE DESIGN FOR 1-SYMBOL SHORT-PUCCH OF UP TO 2 BITS, 3RD GENERATION PARTNERSHIP PROJECT (3GPP), MOBILE COMPETENCE CENTRE ; 650, ROUTE DES LUCIOLES ; F-06921 SOPHIA-ANTIPOLI , vol. RAN WG1, no. Nagoya, Japan; 20170918 - 20170921 12 September 2017 (2017-09-12), XP051330064, Retrieved from the Internet: URL:http://www.3gpp.org/ftp/tsg_ran/WG1_RL 1/TSGR1_AH/NR_AH_1709/Docs/ [retrieved on 2017-09-12]**
• **HUAWEI ET AL: "Short PUCCH for UCI of up to 2 bits", 3GPP DRAFT; R1-1717066, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20171009 - 20171013 8 October 2017 (2017-10-08), XP051340257, Retrieved from the Internet: URL:http://www.3gpp.org/ftp/Meetings_3GPP_ SYNC/RAN1/Docs/ [retrieved on 2017-10-08]**
• **HUAWEI et al.: "Short PUCCH for up to 2 UCI bits", 3GPP TSG RAN WG1 NR Ad-Hoc Meeting, R1-1709958, 30 June 2017 (2017-06-30), XP051299183,**

- InterDigital Inc: "Sequence design for I-symbol short-PUCCH of up to 2 bits", 3GPP TSG RAN WG1 Meeting NR#3, R1-1716478, 21 September 2017 (2017-09-21), XP051330064,

## Description

## TECHNICAL FIELD

This application relates to the field of communications technologies, and in particular, to a sequence-based signal processing method and apparatus.

## BACKGROUND

In a long term evolution (long term evolution, LTE) system, a physical uplink control channel (Physical uplink control channel, PUCCH) occupies 13 or 14 orthogonal frequency division multiplexing (orthogonal frequency division multiplexing, OFDM) symbols or discrete Fourier transform spread orthogonal frequency division multiplexing (discrete fourier transform spread OFDM, DFT-s-OFDM) symbols in one subframe for sending uplink control information (uplink control information, UCI). 1-bit or 2-bit response information is transmitted by using a PCUUH format 1a/1b (PUCCH format 1a/1b), and the PUCCH format 1a/1b is sent through sequence modulation. Usually, in the LTE system, to avoid interference between PUCCHs of two neighboring cells, sequences selected for the two neighboring cells need to have a low cross-correlation. To extend coverage of the PUCCH, it is necessary to ensure that all sent signals have relatively small peak to average power ratio (peak to average power ratio, PAPR) values and cubic metric (cubic metric, CM) values.

The Article by HUAWEI ET AL, "Short PUCCH for UCI of up to 2 bits", vol. RAN WG1, no. Prague, Czech Republic; 20171009 - 20171013, (20171008), 3GPP DRAFT; R1-1717066, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings_3GPP_SYNC/RAN1/Docs/, (20171008), XP051340257 describes Short PUCCH for UCI of up to 2 bits.

The Article by HUAWEI ET AL, "Short PUCCH for UCI of up to 2 bits", vol. RAN WG1, no. Prague, Czech Republic; 20171009 - 20171013, (20171008), 3GPP DRAFT; R1-1717066, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings_3GPP_SYNC/RAN1/Docs/, (20171008), XP051340257 describes Short PUCCH for UCI of up to 2 bits.

Currently, in the LTE system, there are currently 30 root (root) sequences $x_i$, $i$ = 0,1, ..., $N$ - 1 whose lengths are N. The root sequences are used to send UCI or a demodulation reference signal (demodulation reference signal, DMRS) by using the PUCCH format 1a/1b in the LTE system. However, at the design beginning of the 30 root sequences whose lengths are N in the LTE system, optimization of a CM value and optimization of a sequence cross-correlation are mainly considered. For a relationship between a CM value and a PAPR value, a PAPR may not be small if the CM value is small. Therefore, when it is ensured that all the 30 root sequences whose lengths are N have relatively small CM values and a low cross-correlation, it cannot be ensured that PAPR values are also small. In the 3GPP proposal R1-1716478, some 12PSK, 16PSK, 64PSK low-PAPR signals used in a 5G system are proposed. Assuming ideal time synchronization, these signals have relatively good cross-correlation characteristics. However, when a time deviation is considered between signals arriving at a base station, signals with a time deviation have a relatively high cross-correlation. Therefore, more low-PAPR sequences need to be considered, so that some sequences with both relatively small PAPRs and relatively good cross-correlation characteristics can be selected from the low-PAPR sequences.

## SUMMARY

In view of this, embodiments of this application provide a sequence-based signal processing method, a signal processing apparatus, and a communications system, to resolve a prior-art problem that 30 existing root sequences cannot meet a requirement in a current communication application environment in which a signal is sent by using a PUCCH.

A first aspect of the embodiments of this application provides a sequence-based signal processing method, including: determining a sequence $\{f_n\}$ including N elements, where $f_n$ is an element in the sequence $\{f_n\}$, the sequence $\{f_n\}$ is a sequence that meets a preset condition, the preset condition is $f_n = A \cdot x_n \cdot e^{2\pi j \cdot a \cdot n}$ , a value of n ranges from 0 to N-1, A is a non-zero complex number, $a$ is a real number, $j = \sqrt{-1}$ , for an element $x_n$, $x_n = u \cdot e^{2\pi j \cdot s_n / M}$, M=12, u is a non-zero complex number, a set that consists of a sequence $\{s_n\}$ consisting of an element $s_n$ includes at least one of sequences in a first sequence set or at least one of equivalent sequences of the sequences in the first sequence set, and herein, for the sequence in the first sequence set, refer to descriptions in the specification; and mapping the sequence $\{f_n\}$ to N subcarriers to generate and send a first signal.

In the foregoing solution, with the determined sequence, when a signal is sent by using a PUCCH, a low cross-correlation between sequences can be maintained, and a relatively small PAPR value and a relatively small CM value can be maintained. Therefore, a requirement in a communications application environment in which the signal is sent by using the PUCCH is met.

In a possible design, the mapping the sequence $\{f_n\}$ to N subcarriers includes:

respectively mapping the N elements in the se-

quence $\{f_n\}$ to N consecutive subcarriers; or respectively mapping the N elements in the sequence $\{f_n\}$ to N equally spaced subcarriers.

In a possible design, the first signal is a reference signal, or the first signal is a signal used to carry communication information.

In a possible design, the set that consists of the sequence $\{s_n\}$ consisting of the element $s_n$ includes at least two sequences in a second sequence set or equivalent sequences of two sequences in the second sequence set. Herein, for a sequence in the second sequence set, refer to descriptions in the specification.

In a possible design, the equivalent sequence is $\{q_n\}$, for $q_n$ in the equivalent sequence $\{q_n\}$, $q_n = s_n + u_n \pmod{M}$, and for $u_n$ in a sequence $\{u_n\}$ consisting of $u_n$, $u_n = f + g \cdot n \pmod{M}$, where $f \in \{0, 1, 2, ..., M-1\}$, $g \in \{0, 1, 2, ..., M-1\}$, and M=12.

A second aspect of the embodiments of this application provides a sequence-based signal processing method. The signal processing method includes: receiving a first signal carried on N subcarriers, and obtaining N elements in a sequence $\{f_n\}$, where the first signal is generated by mapping the sequence $\{f_n\}$ to the N subcarriers, $f_n$ is an element in the sequence $\{f_n\}$, the sequence $\{f_n\}$ is a sequence that meets a preset condition, the preset condition is $f_n = A \cdot x_n \cdot e^{2\pi j \cdot a \cdot n}$, a value of n ranges from 0 to N-1, A is a non-zero complex number, $a$ is a real number, for an element $x_n$, $x_n = u \cdot e^{2\pi \cdot j \cdot s_n / M}$, M=12, u is a non-zero complex number, a set that consists of a sequence $\{s_n\}$ consisting of an element $s_n$ includes at least one of sequences in a first sequence set or at least one of equivalent sequences of the sequences in the first sequence set, and herein, for the sequence in the first sequence set, refer to descriptions in the specification; and processing the first signal based on the N elements in the sequence $\{f_n\}$.

In the foregoing solution, with the determined sequence, when a signal is sent by using a PUCCH, a low cross-correlation between sequences can be maintained, and a relatively small PAPR value and a relatively small CM value can be maintained. Therefore, a requirement in a communications application environment in which the signal is sent by using the PUCCH is met.

In a possible design, the receiving a first signal carried on N subcarriers includes: obtaining the first signal on the N subcarriers on N consecutive subcarriers; or obtaining the first signal on the N subcarriers on N equally spaced subcarriers.

In a possible design, the first signal is a reference signal, or the first signal is a signal used to carry communication information.

In a possible design, the set that consists of the sequence $s_n$ consisting of the element $\{s_n\}$ includes at least two sequences in a second sequence set or equivalent sequences of two sequences in the second sequence set. Herein, for a sequence in the second sequence set, refer to descriptions in the specification.

In a possible design, the equivalent sequence is $\{q_n\}$, for $q_n$ in the equivalent sequence $\{q_n\}$, $q_n = s_n + u_n \pmod{M}$, and for $u_n$ in a sequence $\{u_n\}$ consisting of $u_n$, $u_n = f + g \cdot n \pmod{M}$, where $f \in \{0, 1, 2, ..., M-1\}$ and $g \in \{0, 1, 2, ..., M-1\}$.

A third aspect of the embodiments of this application provides a signal processing apparatus. The signal processing apparatus may be a communications device, or may be a chip in the communications device. The communications device or the chip has a function of implementing the sequence-based signal processing method according to any one of the first aspect and the possible designs of the first aspect. The function may be implemented by using hardware, or may be implemented by hardware by executing corresponding software. The hardware or the software includes one or more units corresponding to the foregoing functions.

The communications device includes a processing unit and a transceiver unit. The processing unit may be a processor, the transceiver unit may be a transceiver, and the transceiver includes a radio frequency circuit. Optionally, the communications device further includes a storage unit, and the storage unit may be, for example, a memory. When the communications device includes the storage unit, the storage unit is configured to store a computer executable instruction, the processing unit is connected to the storage unit, and the processing unit executes the computer executable instruction stored in the storage unit, so that the communications device performs the sequence-based signal processing method according to any one of the first aspect and the possible designs of the first aspect.

The chip includes a processing unit and a transceiver unit. The processing unit may be a processor, and the transceiver unit may be an input/output interface, a pin, a circuit, or the like on the chip. The processing unit may execute a computer executable instruction stored in a storage unit, so that the chip performs the sequence-based signal processing method according to any one of the first aspect and the possible designs of the first aspect. Optionally, the storage unit may be a storage unit (for example, a register or a cache) in the chip, or the storage unit may be a storage unit (for example, a read-only memory (read-only memory, ROM)) that is in the communications device and that is outside the chip, another type of static storage device (for example, a random access memory (random access memory, RAM)) that may store static information and an instruction, or the like.

The processor mentioned in the third aspect may be a central processing unit (central processing unit, CPU), a microprocessor, or an application-specific integrated circuit (application specific integrated circuit, ASIC), or may be one or more integrated circuits configured to control program execution of the sequence-based signal processing method according to any one of the first aspect and the possible designs of the first aspect.

A fourth aspect of the embodiments of this application provides a signal processing apparatus. The signal processing apparatus may be a communications device, or may be a chip in the communications device. The communications device or the chip has a function of implementing the sequence-based signal processing method according to any one of the second aspect and the possible designs of the second aspect. The function may be implemented by using hardware, or may be implemented by hardware by executing corresponding software. The hardware or the software includes one or more units corresponding to the foregoing functions.

The communications device includes a processing unit and a transceiver unit. The processing unit may be a processor, the transceiver unit may be a transceiver, and the transceiver includes a radio frequency circuit. Optionally, the communications device further includes a storage unit, and the storage unit may be, for example, a memory. When the communications device includes the storage unit, the storage unit is configured to store a computer executable instruction, the processing unit is connected to the storage unit, and the processing unit executes the computer executable instruction stored in the storage unit, so that the communications device performs the sequence-based signal processing method according to any one of the second aspect and the possible designs of the second aspect.

The chip includes a processing unit and a transceiver unit. The processing unit may be a processor, and the transceiver unit may be an input/output interface, a pin, a circuit, or the like on the chip. The processing unit may execute a computer executable instruction stored in a storage unit, so that the chip performs the sequence-based signal processing method according to any one of the second aspect and the possible designs of the second aspect. Optionally, the storage unit may be a storage unit (for example, a register or a cache) in the chip, or the storage unit may be a storage unit (for example, a read-only memory (read-only memory, ROM)) that is in the communications device and that is outside the chip, another type of static storage device (for example, a random access memory (random access memory, RAM)) that may store static information and an instruction, or the like.

The processor mentioned in the fourth aspect may be a central processing unit (central processing unit, CPU), a microprocessor, or an application-specific integrated circuit (application specific integrated circuit, ASIC), or may be one or more integrated circuits configured to control program execution of the sequence-based signal processing method according to any one of the second aspect and the possible designs of the second aspect.

A fifth aspect of the embodiments of this application provides a communications system. The communications system includes the communications device provided in the third aspect of the embodiments of this application and the communications device provided in the fourth aspect of the embodiments of this application.

A sixth aspect of the embodiments of this application provides a computer readable storage medium, configured to store a computer instruction. When the computer instruction is run on a computer, the computer is enabled to perform the sequence-based signal processing method according to the first aspect or the second aspect of the embodiments of this application.

A seventh aspect of the embodiments of this application provides a computer program product including an instruction. When the computer program product is run on a computer, the computer is enabled to perform the sequence-based signal processing method according to the first aspect or the second aspect of the embodiments of this application.

According to the sequence-based signal processing method, the sequence-based signal processing apparatus, the communications system, the computer readable storage medium, and the computer program product disclosed in the embodiments of this application, a sequence meeting a requirement for sending a signal by using a PUCCH is determined, the sequence is the sequence $\{f_n\}$ including the N elements, $f_n$ is an element in the sequence $\{f_n\}$, and the determined sequence $\{f_n\}$ is a sequence that meets the preset condition. Then the sequence $\{f_n\}$ is mapped to the N subcarriers to generate and send the first signal. With the determined sequence, when the signal is sent by using the PUCCH, a low cross-correlation between sequences can be maintained, and a relatively small PAPR value and a relatively small CM value can be maintained. Therefore, the requirement in the communications application environment in which the signal is sent by using the PUCCH is met.

**DESCRIPTION OF DRAWINGS**

FIG. 1 is a schematic flowchart of sequence-based signal sending processing according to an embodiment of this application;

FIG. 2 is a schematic flowchart of determining a sequence $\{f_n\}$ by a terminal device according to an embodiment of this application;

FIG. 3 is a schematic flowchart of generating and sending a first signal by a terminal device according to an embodiment of this application;

FIG. 4a and FIG. 4b are schematic diagrams of mapping a sequence $\{f_n\}$ including N elements to N subcarriers according to an embodiment of this application;

FIG. 5 is a schematic diagram of processing a first signal by a network device according to an embodiment of this application;

FIG. 6 is a schematic structural diagram of a terminal device according to an embodiment of this application;

FIG. 7 is a schematic structural diagram of another terminal device according to an embodiment of this application;

FIG. 8 is a schematic structural diagram of a network device according to an embodiment of this application;
FIG. 9 is a schematic structural diagram of another network device according to an embodiment of this application; and
FIG. 10 is a schematic structural diagram of a communications system according to an embodiment of this application.

## DESCRIPTION OF EMBODIMENTS

Embodiments of this application provide a sequence-based signal processing method, a related device, and a communications system. A sequence meeting a requirement for sending a signal by using a PUCCH is determined. In this way, when the signal is sent by using the PUCCH, a low cross-correlation between sequences can be maintained, and a relatively small PAPR value and a relatively small CM value can be maintained. Therefore, a requirement in a communications application environment in which the signal is sent by using the PUCCH is met.

In the embodiments, claims, and accompanying drawings of this application, the terms "first", "second", and the like are intended to distinguish between different objects but do not indicate a particular order. In addition, the terms "include" and "have" are not exclusive. For example, a process, a method, a system, a product, or a device including a series of steps or units is not limited to the listed steps or units, and may further include steps or units that are not listed.

Currently, in an LTE system, a 4G system, a 4.5G system, and a 5G system, a PUCCH can be used to send UCI and a DMRS. To improve coverage performance of the PUCCH, the PUCCH is sent through sequence modulation. To be specific, on all OFDM symbols for transmitting UCI, a to-be-sent signal is modulated onto a computer generated sequence (computer generated sequence, CGS). CGSs are filtered, to ensure that each sent signal has a relatively small PAPR value and a relatively small CM value, thereby extending coverage of the PUCCH. The PUCCH is also used on a cell border. Therefore, for a user on the cell border, a cross-correlation between sequences needs to be further considered when the CGSs are filtered.

For example, a first cell and a second cell are mutually neighboring cells. If a cross-correlation between a first sequence used by the first cell and a second sequence used by the second cell is relatively high, interference from a PUCCH sent by user equipment in the first cell may be caused, on a border of the first cell, to a base station of the second cell when the base station sends a signal using a PUCCH. Consequently, receiving performance of the PUCCH deteriorates. Therefore, sequences with a low cross-correlation need to be determined when the CGSs are filtered.

To ensure that a relatively small PAPR value and a relatively small CM value can be maintained and a low cross-correlation between sequences can be maintained when UCI and a DMRS are sent by using the PUCCH in the LTE system, the 4G system, the 4.5G system, and the 5G system, or even another communications system or communications application environment that has a higher requirement, the embodiments of this application provide a specific implementation process of sequence-based signal processing. The process is described in detail in the following embodiments.

In the embodiments of this application, sequence-based signal processing is described mainly from a receiver side and a transmitter side in a communications system or a communications application environment. The receiver side may be a network device, and the transmitter side may be a terminal device; or the receiver side may be a terminal device, and the transmitter side may be a network side. In the following embodiments, descriptions are provided by using an example in which the receiver side is a network device and the transmitter side is a terminal device, but the present invention is not limited thereto.

The terminal device used in the embodiments of this application may be user equipment. The user equipment may be a wired device, or may be a wireless device. The wireless device may be a handheld device having a wireless connection function, or another processing device connected to a wireless modem, or a mobile terminal that communicates with one or more core networks by using a radio access network. For example, the wireless terminal may be a mobile telephone, a mobile phone, a computer, a tablet computer, a personal digital assistant (personal digital assistant, PDA), a mobile internet device (mobile internet device, MID), a wearable device, an electronic reader, or the like. For another example, the wireless terminal may alternatively be a portable, pocket-sized, handheld, computer built-in, or in-vehicle mobile device. For still another example, the wireless terminal may be a mobile station or an access point.

The network device used in the embodiments of this application may be a base station. The base station may include a macro base station, a micro base station, a relay node, an access point, a base station controller, a sending point, a receiving point, and the like in various forms. In systems in which different radio access technologies are used, specific names of the base station may be different.

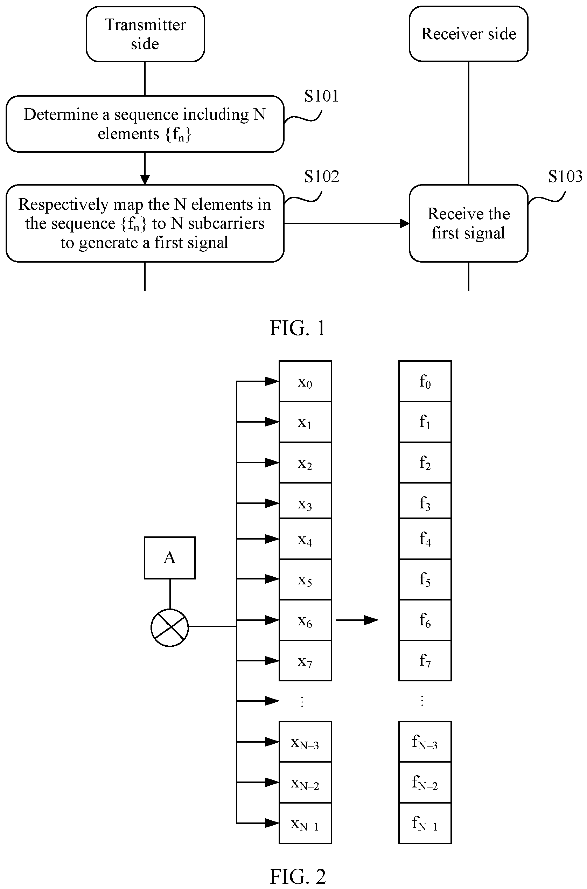

FIG. 1 is a schematic flowchart of a sequence-based signal processing method according to an embodiment of this application. The method includes the following steps.

S101. A terminal device determines a sequence $\{f_n\}$ including N elements, where N is a positive integer greater than 1, for example, N=12.

Optionally, S101 may be performed as follows: After accessing a network, the terminal device determines the sequence $\{f_n\}$ including the N elements. Alternatively, when the terminal device accesses a network, a network device determines a sequence $\{x_n\}$ and configures the sequence $\{x_n\}$ for the terminal device, and the terminal device determines, based on the sequence $\{x_n\}$, the sequence $\{f_n\}$ including the N elements.

In specific implementation, $f_n$ is an element in the sequence $\{f_n\}$, and the determined sequence $\{f_n\}$ is a sequence that meets a preset condition. The preset condition is $f_n = A \cdot x_n \cdot e^{2\pi j \cdot a \cdot n}$. Herein, n is an integer, a value of n ranges from 0 to N-1, A is a non-zero complex number, $a$ is a real number, $j = \sqrt{-1}$, for an element $x_n$, $x_n = u \cdot e^{2\pi j \cdot s_n/M}$, M=12, and u is a non-zero complex number.

A set that includes a sequence $\{s_n\}$ including an element $s_n$ includes at least one of sequences in a first sequence set or at least one of equivalent sequences of the sequences in the first sequence set. Optionally, the first sequence set does not include a sequence $\{s_n\}$ corresponding to an existing low-PAPR sequence.

A length of a sequence in the first sequence set is 12, and the sequences in the first sequence set include some or all of the following 288 sequences (which are marked as a set 1). PAPRs of sequences $\{f_n\}$ corresponding to these sequences and equivalent sequences of these sequences are all less than 2.0 dB, and a largest value of a cross-correlation with an LTE sequence whose length is 12 is less than 0.79647. The 288 sequences are as follows:

{-2, 4, -2, 4, 0, 2, 2, 0, 5, 5, 0, 0}; {-1, 6, 1, -4, -2, 4, -5, -5, 6, -5, 0, 0}; {3, -3, 3, -3, 0, -2, -2, 0, -5, -5, 0, 0}; {2, -4, 2, -4, -1, -2, -2, -1, -5, 6, 0, 0}; f-4, 2, -4, 3, -1, 1, 2, 1, 4, 5, 0, 0}; {0, 6, 0, -5, -2, -4, -3, -1, 6, 6, 0, 0}; {0, 6, 0, -5, -2, -3, -3, -1, 6, 6, 0, 0}; {-1, 5, -1, 6, -2, -3, -3, -1, 5, 5, 0, 0}; {-4, 2, -4, 4, -4, -5, -4, -2, 5, 5, 0, 0}; {-5, 1, -5, 3, -5, 6, -5, -3, 5, 5, 0, 0}; {4, -2, 4, 0, -4, -1, 0, -1, 3, 4, 0, 0}; {0, 4, -4, 2, -3, -2, -3, 4, 1, -2, 0, 0}; {-1, 3, -5, 1, -4, -3, -3, 4, 1, -2, 0, 0}; {0, 5, -2, 5, 2, 4, 3, 1, -3, -4, 0, 0}; {-3, 1, 5, -1, -5, -4, -5, 3, 0, -3, 0, 0}; {3, -3, 3, -1, 0, 6, -3, -3, -5, -4, 0, 0}; {1, 6, -1, 6, 6, 0, 2, 0, -3, -1, 0, 0}; {5, -2, 3, -2, 0, -1, 0, 0, -5, 6, 0, 0}; {-3, 3, -3, 5, -4, -4, -4, -2, 5, 5, 0, 0}; {-3, 0, 3, -3, 3, 1, 3, -5, 4, 1, 0, 0}; {-1, 4, -3, 5, 4, -2, 1, 0, -3, -2, 0, 0}; {3, -1, -5, -5, 1, -4, 0, 1, 4, -1, 0, 0}; {2, -2, 6, 6, 1, -5, 0, 1, 4, -1, 0, 0}; {0, -5, 2, 2, -5, 1, 4, 4, 6, 1, 0, 0}; {1, -3, 5, 6, 0, -5, -1, 1, 3, -1, 0, 0}; {-3, 4, -1, -1, 5, -1, 3, 4, 5, 0, 0, 0}; {-5, 1, -5, 6, -1, 4, -5, -5, -5, 1, 0, 0}; {-2, 5, 0, 0, 6, 0, 3, 4, 5, 0, 0, 0}; {-5, 1, -5, 6, -1, 5, -5, 6, -5, 1, 0, 0}; {3, -3, 3, 3, -4, 2, 5, 5, 6, 0, 0, 0}; {-3, 3, -3, -3, 4, -2, -5, -5, 6, 0, 0, 0}; {4, -3, 2, 2, -4, 1, -2, -3, -5, 0, 0, 0}; {5, -1, 5, 6, 1, -5, 5, 6, 5, -1, 0, 0}; {5, -1, 5, 6, 1, -4, 5, 5, 5, -1, 0, 0}; {3, -4, 1, 1, -5, 1, -3, -4, -5, 0, 0, 0}; {-1, 3, -5, 6, 0, 5, 1, -1, -3, 1, 0, 0}; {0, 5, -2, -2, 5, -1, -4, -4, 6, -1, 0, 0}; {-2, 2, 6, 6, -1, 5, 0, -1, -4, 1, 0, 0}; {-2, 2, 6, 6, 0, 5, 1, -1, -3, 1, 0, 0}; {-3, 1, 5, 5, -1, 4, 0, -2, -4, 1, 0, 0}; {-3, 1, 5, 5, -1, 4, 0, -1, -4, 1, 0, 0}; {-2, 3, -4, -3, 4, -2, -5, -5, 6, -1, 0, 0}; {3, 0, -3, 3, -3, -1, -3, 5, -4, -1, 0, 0}; {4, -2, 4, -4, 4, 5, 4, 2, -5, -5, 0, 0}; {-5, 2, -3, 2, 0, 1, 0, 0, 5, 6, 0, 0}; {-1, 5, -1, 3, 5, 1, 1, 6, 5, -1, 0, 0}; {0, -5, 2, -5, -2, -4, -3, -1, 3, 4, 0, 0}; {4, -2, 4, -3, 6, 6, 4, 3, -5, -5, 0, 0}; {2, -4, 2, -5, 4, 5, 3, 2, -5, -5, 0, 0}; {-3, 3, -3, 2, 0, -5, 4, 3, -1, 0, 0, 0}; {0, 6, 0, 5, 3, 4, 3, 1, 6, 6, 0, 0}; {6, 0, 6, -1, 2, 0, -1, 0, -4, -5, 0, 0}; {-4, 4, 1, -4, -4, 0, 4, 0, 3, -1, 0, 0}; {-1, 5, 0, 5, 3, 3, 2, 1, 6, -5, 0, 0}; {-3, 2, -4, 0, -2, -4, -5, 4, -4, -4, 0, 0}; {-1, 6, 2, -4, -2, -3, 4, -5, -1, 2, 0, 0}; {5, -2, 4, -3, 5, 6, 5, 3, -5, -5, 0, 0}; {-1, 5, 0, 6, -3, -4, -4, -2, 6, 6, 0, 0}; {-5, 1, -4, 3, -5, 6, -5, -3, 5, 5, 0, 0}; {5, -3, 2, -5, -3, 6, 3, -4, 6, 0, 0, 0}; {3, -5, 0, 5, -4, 5, 2, -5, 5, 0, 0, 0}; {0, 5, -1, 5, 5, -2, -2, 2, 2, 2, 0, 0}; {-5, 0, 6, 0, 2, 0, 0, 1, -4, -5, 0, 0}; {-4, 1, -5, 3, -5, 6, -4, -3, 5, 5, 0, 0}; {-3, 1, 6, 1, -5, -4, -4, 3, 1, -2, 0, 0}; {6, -3, 1, -5, 1, 0, 1, 6, 3, 0, 0, 0}; {-5, -1, 4, 0, 3, -3, -4, 2, 0, -2, 0, 0}; {5, 0, -4, -4, 2, -3, 1, 2, 4, -1, 0, 0}; {3, -2, 6, 6, 1, -4, 0, 1, 4, -1, 0, 0}; {-1, 5, 0, 0, 5, 0, 4, 4, 5, 0, 0, 0}; {5, -1, 6, 6, -1, -2, 4, 6, 2, 0, 0, 0}; {-1, 5, 0, 0, 6, 0, 3, 4, 5, 0, 0, 0}; {-1, 4, -2, -2, 4, -1, -4, -4, 6, -1, 0, 0}; {-5, -1, 4, 3, -3, 3, -1, -2, -4, 0, 0, 0}; {-3, 1, 6, 5, -1, 4, 0, -2, -3, 1, 0, 0}; {-2, 3, -3, -3, 4, -2, -5, -5, 6, -1, 0, 0}; {-5, -1, 4, 3, -2, 3, -1, -2, -4, 0, 0, 0}; {-4, 1, -5, -5, 3, -3, 6, 6, 6, -1, 0, 0}; {6, -2, 3, 2, -3, 2, -1, -3, -4, 0, 0, 0}; {3, 6, -2, -3, 3, -5, 3, 1, -2, 2, 0, 0}; {-5, -1, 4, 4, -3, 3, -1, -2, -4, 1, 0, 0}; {6, -2, 3, 3, -3, 3, -1, -2, -4, 0, 0, 0}; {5, -3, 2, 2, -4, 2, -2, -3, -5, 0, 0, 0}; {5, 1, -2, 4, -2, 0, -3, 6, -4, -1, 0, 0}; {3, -2, 6, -1, 4, 5, 1, -2, -2, 0, 0, 0}; {5, -1, -5, -1, 1, 3, -3, 3, 3, 1, 0, 0}; {4, 1, 0, -5, 1, 6, 2, 2, 5, -3, 0, 0}; {3, -1, -3, 3, -3, -1, 6, -4, -5, -1, 0, 0}; {1, -3, -5, 1, -5, -2, 6, -5, 6, -3, 0, 0}; {2, -5, 2, -5, 4, 5, 3, 2, -5, -5, 0, 0}; {-1, 3, -3, 1, 0, 4, 1, -5, 6, 2, 0, 0}; {-2, 2, -4, 0, -1, 3, 1, 6, 5, 3, 0, 0}; {5, -1, -5, 2, -5, -1, 3, 5, 4, 4, 0, 0}; {5, -1, -5, 2, -5, -1, 3, 6, 5, 4, 0, 0}; {0, 4, -2, 3, 6, 4, 0, 6, 4, 0, 0, 0}; {-3, 3, -1, 6, -5, -2, -4, -2, 3, 3, 0, 0}; {-4, -1, 4, -3, -1, -5, 3, -4, 5, 0, 0, 0}; {-5, -2, 3, -4, -2, -5, 4, -4, 6, 0, 0, 0}; {0, 4, -2, 4, -2, -3, -1, -1, 4, 3, 0, 0}; {6, -3, 2, -5, 4, -5, -5, -3, 6, 3, 0, 0}; {6, -2, 4, -2, -4, 1, 0, 4, 4, 2, 0, 0}; {6, -2, 4, -2, -3, 2, 1, 5, 4, 2, 0, 0}; {4, -3, 4, 0, 0, 6, -5, -1, 1, -1, 0, 0}; {-1, 2, -5, 1, 0, 4, 3, 6, 5, 3, 0, 0}; {3, 5, -3, 2, 3, -1, 6, -1, -5, 1, 0, 0}; {-2, 1, 6, 0, -5, -4, -2, -2, 4, 2, 0, 0}; {-3, 2, -3, 6, -3, 3, 4, -1, -2, -3, 0, 0}; {1, 3, -5, 1, 2, -3, 4, -3, 5, 0, 0, 0}; {0, 2, 6, 0, 1, -3, 4, -3, 5, 0, 0, 0}; {-3, -1, 3, -2, 6, -2, -5, -3, -5, 5, 0, 0}; {0, 3, -4, -5, 1, 6, 1, 0, -3, 1, 0, 0}; {-4, 3, 0, 4, -4, -3, 4, 0, 0, -1, 0, 0}; {-4, 4, 2, -5, 0, 3, -2, -5, -2, 0, 0, 0}; {-5, 3, 1, 6, -1, 2, -2, -5, -2, 0, 0, 0}; {5, 1, 0, 5, -2, 2, -3, 6, -2, 0, 0, 0}; {-4, 4, 3, -3, 3, -5, 4, 5, 5, -4, 0, 0}; {4, -1, -3, 3, -3, -1, -5, -4, 6, -2, 0, 0}; {-1, 5, 2, -4, -4, 1, 5, -1, 1, 0, 0, 0}; {-3, 3, 0, 6, -5, -1, -5, -2, 3, 2, 0, 0}; {2, 6, 1, 6, 6, -1, -2, 4, 3, 1, 0, 0}; {-1, 2, -4, 0, 0, 4, 2, -5, 5, 2, 0, 0}; {-2, 4, 1, -4, 3, -5, -1, 4, 4, 3, 0, 0}; {-5, -1, 6, -1, -3, 1, 2, -5, 4, 2, 0, 0}; {4, -4, 3, -4, -5, 0, -1, 4, 4, 1, 0, 0}; {4, -4, 3, -4, -5, 0, -1, 4, 4, 2, 0, 0}; {2, 5, -1, 3, 1, 5, 3, -4, 6, 3, 0, 0}; {1, 4, -2, 3, 1, 5, 3, -5, 6, 3, 0, 0}; {3, -4, 4, -1, -1, 5, 6, -1, 1, -1, 0, 0}; {-2, 1, -5, 0, -1, 3, 2, 6, 5, 3, 0, 0}; {-2,4, 1, -3, 3, -5, 0, 3, 3, 3, 0, 0}; {6, -2, 5, -1, 5, 5, -4, -4, 5, 5, 0, 0}; {5, -3, 4, -2, 5, 5, -5, -4, 5, 5, 0, 0}; {5, -2, 6, 1, 0, 6, -5, 0, 2, 0, 0, 0}; {1, 4, -2, 3, 0, 4, 4, -4, 6, 3, 0, 0}; {0, 2, -5, 0, 1, -3, 4, -3, 5, 0, 0, 0}; {-2, 0, 5, -2, 0, -4, 4, -3, 6, 0, 0, 0}; {5, -5, 0, 6,

3, -5, 5, -4, 6, 5, 0, 0}; {-5, -2, 4, -1, 5, -4, -5, 3, 0, -2, 0, 0}; {-3, -1, 4, 2, 4, -1, 6, 1, 0, 4, 0, 0}; {5,-5, 1, -1, 2, -3, 4, -1, -1, 3, 0, 0}; {-2, -5, -4, 2, -3, 2, 0, 2, 3, -5, 0, 0}; {0, -5, 6, -1, 3, 6, 1, -3, -1, -1, 0, 0}; {5, 0, -1, 5, 5, -3, 3, -2, 1, 0, 0, 0}; {1, -4, -5, 1, 3, -5, 1, -3, 0, -1, 0, 0}; {-5, 2, 1, -5, -2, 3, -3, 6, -2, 0, 0, 0}; {0, 6, 4, -2, -4, 1, 5, -1, 1, 1, 0, 0}; {-1, 4, 1, -5, -3, 3, 4, -1, 0, -2, 0, 0}; {-2, 4, 2, -3, 1, 5, 4, 5, -1, 2, 0, 0}; {-3, -1, 5, -2, -1, -5, 3, -4, 5, -1, 0, 0}; {-5, -3, 3, -4, -2, 6, 1, -5, 4, -1, 0, 0}; {6, -5, 0, 4, 5, 0, -5, -1, -5, 1, 0, 0}; {0, 4, 0, -5, -1, 4, 5, 1, -1, -3, 0, 0}; {2, -3, -3, 3, 5, 1, -4, 1, -2, -1, 0, 0}; {-3, 3, 2, -4, -3, 5, -1, 3, 0, 0, 0}; {-4, 2, 1, -5, -4, 4, -2, 2, 0, 0, 0, 0}; f-3, -1, 6, -4, 6, -2, 5, -1, -4, 5, 0, 0}; {1, -4, -4, 3, 2, 6, 0, -3, 0, -1, 0, 0}; {-1, 5, 4, -2, -4, 0, 5, 0, 2, 1, 0, 0}; {0, -5, -5, 2, 1, 6, 0, -4, -1, -1, 0, 0}; {-1, 6, 6, 1, 1, 6, 0, -4, -1, -1, 0, 0}; {-4, 2, 1, -5, 6, -1, 3, -2, 1, 0, 0, 0}; {-3, 4, 4, -1, -1, 5, -2, 6, -2, -2, 0, 0}; {-4, 3, 3, -2, -2, 4, -2, 6, -2, -1, 0, 0}; {-4, 3, 3, -2, -1, 4, -2, -5, -1, -1, 0, 0}; {-5, 1, 0, 6, 6, -2, 4, -1, 1, 0, 0, 0}; {-4, 3, 3, -2, -1, 4, -1, -5, -1, -1, 0, 0}; {3, 5, 0, 3, -4, 4, 2, -5, 5, -1, 0, 0}; {-3, 3, 2, -3, 6, -3, 3, 0, 1, -1, 0, 0}; {1, 4, 0, -5, -1, 4, 5, 1, -1, -4, 0, 0}; {-3, -2, 4, -2, -1, -5, 2, -5, 4, -1, 0, 0}; {-4, 2, 2, -5, -3, 4, -2, 3, 0, 0, 0, 0}; {5, -3, -5, -1, -3, 4, -4, -3, 5, 4, 0, 0}; {-5, 3, 5, 1, 3, -4, 4, 3, -5, -4, 0, 0}; {6, 0, 0, 6, -5, 3, -2, 2, -1, 0, 0, 0}; {6, 0, 0, 6, -5, 3, -2, 3, -1, 0, 0, 0}; {-4, 2, 2, -4, 6, -2, 4, -1, 1, 1, 0, 0}; {-5, 1, 1, -5, 5, -3, 3, -2, 1, 1, 0, 0}; {6, 0, 0, 6, 5, -3, 2, -2, 1, 0, 0, 0}; {6, 0, 0, 6, 5, -3, 3, -2, 1, 0, 0, 0}; {4, -2, -2, 5, 3, -4, 2, -3, 0, 0, 0, 0}; {6, 3, -5, 2, -4, 6, 5, 3, 6, -5, 0, 0}; {-3, -5, 0, -3, 4, -4, -2, 5, -5, 1, 0, 0}; {-4, 3, 5, -1, -5, 2, 6, -5, 0, 0, 0, 0}; {4, -2, -1, 5, 4, -4, 2, -2, 0, 0, 0, 0}; {-1, 4, 4, -3, -2, 6, 0, 3, 0, 1, 0, 0}; {0, -5, -3, 4, -4, 5, 1, -5, -5, -2, 0, 0}; {5, -2, -2, 3, 0, 4, -4, 3, 1, 2, 0, 0}; {0, 6, -5, 2, 0, 5, 0, -4, -1, 0, 0, 0}; {-2, 3, 3, -3, -5, -1, 4, -1, 2, 1, 0, 0}; {3, -4, -4, 2, -2, 1, -5, 3, 1, 1, 0, 0}; {2, -4, -3, 4, 1, 6, 1, -3, -1, 0, 0, 0}; {0, 4, 3, -4, 3, 6, -1, 6, 4, 2, 0, 0}; {-5, 5, -1, 1, -2, 3, -4, 1, 1, -3, 0, 0}; {-1, -3, 3, -4, 6, 3, -2, 0, -5, -1, 0, 0}; {-4, 4, -4, 1, -5, -4, 6, 4, -5, -5, 0, 0}; {6, 5, 0, -4, -5, 0, 5, 1, 5, -1, 0, 0}; {5, 3, -3, 4, 2, 6, -1, 5, -4, 1, 0, 0}; {3, 1, -5, 2, 1, 5, -3, 4, -5, 1, 0, 0}; {4, -1, 2, -5, 0, -1, -3, -5, -4, -3, 0, 0}; {3, -2, 1, -5, 1, -2, -4, 6, -5, -3, 0, 0}; {-4, 1, 2, -5, -4, 4, -2, 5, 0, 1, 0, 0}; {2, -4, -2, 4, 0, 5, -3, -3, 1, -1, 0, 0}; {5, -2, -1, 5, 2, -3, 3, 6, 2, 0, 0, 0}; {2, 5, 4, -2, 3, -2, 0, -2, -3, 5, 0, 0}; {-5, -1, 0, -5, 2, -2, 3, 6, 2, 0, 0, 0}; {3, 1, -4, -2, -4, 1, 6, -1, 0, -4, 0, 0}; {2, -1, 5, -2, -5, 5, 0, 1, -4, -1, 0, 0}; {2, 0, -5, 2, 0, 4, -4, 3, 6, 0, 0, 0}; {0, -2, 5, 0, -1, 3, -4, 3, -5, 0, 0, 0}; {4, -1, 3, -4, 2, -1, -4, 6, -5, -4, 0, 0}; {2, -4, -1, 3, -3, 5, 0, -3, -3, -3, 0, 0}; {4,-2, 1, 6, 0, -1, -3, -5, -4, -3, 0, 0}; {-1, 5, -4, 1, -5, 3, -1, -4, -4, -3, 0, 0}; {-2, 4, -5, 0, 6, 2, -1, -4, -4, -3, 0, 0}; {3, -3, 0, 6, 5, 1, 5, 2, -3, -2, 0, 0}; {5, 2, -4, 5, 1, 5, -4, 4, 6, 0, 0, 0}; {3, 3, 0, 1, -5, 0, 6, 2, -4, -4, 0, 0}; {4, -4, -3, 3, -3, 5, -4, -5, -5, 4, 0, 0}; {-1, 3, 5, -1, 5, 2, 6, 5, 6, 3, 0, 0}; {-3, 1, 3, -3, 3, 1, 6, 4, 5, 1, 0, 0}; {-4, -1, 0, 5, -1, 6, -2, -2, -5, 3, 0, 0}; {-5, -1, 1, -4, 2, -1, 3, 6, 4, 1, 0, 0}; {5, -3, -1, 6, 1, -2, 2, 5, 2, 0, 0, 0}; {4, -4, -2, 5, 0, -3, 2, 5, 2, 0, 0, 0}; {4, -3, 0, -4, 4, 3, -4, 0, 0, 1, 0, 0}; {4, -2, 2, -1, -1, 6, -1, -3, -5, -4, 0, 0}; {0, -3, 4, 5, -1, 6, -1, 0, 3, -1, 0, 0}; {0, -2, 6, 0, -1, 3, -4, 3, -5, 0, 0, 0}; {-1, -3, 5, -1, -2, 3, -4, 3, -5, 0, 0, 0}; {-5, 2,

-5, -1, 6, -5, 6, 4, -5, -5, 0, 0}; {-5, 3, -3, 2, -2, 0, 1, 0, 4, 5, 0, 0}; {-3, -5, 3, -2, -3, 1, 6, 1, 5, -1, 0, 0}; {-3, 5, -1, 5, -1, 1, 2, 1, 4, 5, 0, 0}; {-4, 4, -2, 4, -2, 1, 2, 1, 4, 5, 0, 0}; {-5, 3, -3, 3, -2, 0, 1, 0, 4, 5, 0, 0}; {4, -1, 4, -3, 4, 5, 5, 3, 6, 6, 0, 0}; {1, -4, 1, 6, 1, 2, 6, 5, 1, -1, 0, 0}; {2, -3, 2, -5, 3, 4, 4, 2, 6, 6, 0, 0}; {5, 2, -3, 4, 2, 5, -4, 4, 6, 0, 0, 0}; {4, 1, -4, 3, 1, 5, -3, 4, -5, 0, 0, 0}; {-5, 3, -3, 5, 3, -5, -3, 4, 6, 0, 0, 0}; {-2, 6, 0, -4, 4, -5, -2, 5, -5, 0, 0, 0}; {3, -2, 3, -1, 0, 6, -2, -3, -5, -4, 0, 0}; {0,-5,0,-4, 1, 3, 2, 1, 5, 5, 0, 0}; {-1, 6, 0, -4, 3, 2, 2, -4, -1, 2, 0, 0}; {6, 1, -5, 3, -5, 6, -5, -2, 3, 4, 0, 0}; {-1, 5, -2, 6, -1, 2, 2, 0, 4, 4, 0, 0}; {-3, 2, 6, 1, -4, -5, -1, 2, 2, 0, 0, 0}; {-5, -1, 2, -4, 2, 0, 3, 6, 4, 1, 0, 0}; {5, -1, 4, 1, -2, -3, 3, -4, -2, -1, 0, 0}; {0, -4, 3, 3, -4, -4, 0, 4, 0, 1, 0, 0}; {-5, 3, -2, -2, 4, -2, 2, 3, 5, 0, 0, 0}; {6, 2, -3, -3, 3, -3, 1, 2, 4, 0, 0, 0}; {5, 1, -4, -4, 3, -3, 1, 2, 4, -1, 0, 0}; {6, 2, -3, -2, 3, -2, 1, 3, 4, 0, 0, 0}; {4, -1, 5, 5, -3, 3, 6, 6, 6, 1, 0, 0}; {5, 1, -4, -3, 2, -3, 1, 2, 4, 0, 0, 0}; {5, 1, -4, -3, 3, -3, 1, 2, 4, 0, 0, 0}; {2, -3, 3, 3, -4, 2, 5, 5, 6, 1, 0, 0}; {1, -4, 2, 2, -4, 1, 4, 4, 6, 1, 0, 0}; {1, -5, 0, 0, 6, 0, -3, -4, -5, 0, 0, 0}; {-5, 1, 6, 6, 1, 2, -4, 6, -2, 0, 0, 0}; {1, -5, 0, 0, -5, 0, -4, -4, -5, 0, 0, 0}; {-3, 2, 6, 6, -1, 4, 0, -1, -4, 1, 0, 0}; {-5, 0, 4, 4, -2, 3, -1, -2, -4, 0, 0, 0}; {6, -1, 3, 3, -2, 3, -1, -3, -4, 1, 0, 0}; {-1, -3, 6, 0, 3, -1, 2, 3, 3, -4, 0, 0}; {6, 3, -1, 5, -1, 0, -1, 6, -3, 0, 0, 0}; {6, 2, -3, 2, -4, -1, 3, 4, -1, -1, 0, 0}; {3, -2, 4, -4, 3, 4, 5, 3, 6, 6, 0, 0}; {4, -1, 5, -3, 5, 6, 4, 3, -5, -5, 0, 0}; {1, -4, 2, 6, 2, 3, 4, 2, 6, 6, 0, 0}; {1, -4, 2, -5, 3, 4, 3, 2, 6, 6, 0, 0}; {-2, 5, -1, 4, 1, 2, 2, 1, 5, 6, 0, 0}; {5, -1, 4, -3, 5, 6, 5, 3, -5, -5, 0, 0}; {-5, 3, -2, 5, 3, 6, -3, 4, 6, 0, 0, 0}; {-3, 4, -2, 4, -1, 1, 2, 1, 4, 5, 0, 0}; {-5, 2, -4, 2, -2, 0, 1, 0, 4, 5, 0, 0}; {-3, 5, 0, -5, 4, -5, -2, 5, -5, 0, 0, 0}; {6, 0, 5, -1, -5, -5, 5, 4, -4, -4, 0, 0}; {2, -4, 1, -5, 3, 4, 4, 2, 6, 6, 0, 0}; {2, -4, 1, -5, 4, 4, 4, 2, 6, -5, 0, 0}; {-1, 6, 0, -5, -2, -4, -3, -1, 5, 5, 0, 0}; {-1, 6, 0, -5, -2, -3, -3, -1, 5, 5, 0, 0}; {-4, 3, -3, 4, -4, -5, -4, -2, 5, 5, 0, 0}; {-5, 2, -4, 3, -5, 6, -5, -3, 5, 5, 0, 0}; {-5, 2, -4, 3, -4, -5, -5, -1, 2, 4, 0, 0}; and {-2, 5, -1, 6, -1, 2, 3, 1, 4, 5, 0, 0}.

The first sequence set may further include some or all of the following 283 sequences (which are marked as a set 1a). PAPRs of sequences corresponding to these sequences are less than 2.5 dB, and the sequences corresponding to these sequences may be used to form a plurality of low-correlation sequence groups (each group includes one root sequence, and another sequence is obtained by performing a cyclic shift on the root sequence, to be specific, different values of $a$ are set to obtain cyclic shift sequences of one root sequence). The 283 sequences are as follows:

{-3, 2, -5, 0, -1, -3, -5, 5, -3, -4, 0, 0}; {6, 0, 6, 0, 4, -5, -4, 2, 0, -2, 0, 0}; {0, 0, 0, 1, 10, 8, 5, 0, 4, 9, 10, 2}; {1, -5, 1, -3, -5, -1, -1, 6, -5, 1, 0, 0}; {-4, 1, 6, 1, -2, 6, 0, 2, 4, 3, 0, 0}; {-3, 1, 5, 0, -5, -3, -4, 3, 0, -2, 0, 0}; {4, 5, 6, -2, 3, -1, 4, -1, -2, 4, 0, 0}; {-4, -1, 2, -4, 6, -2, -4, -5, -4, 3, 0, 0}; {-2, 3, -4, 4, 5, 6, 1, 1, -3, -5, 0, 0}; {0, 0, 0, 4, 8, 11, 9, 6, 10, 5, 0, 11}; {2, -4, 2, 1, 6, 4, -5, -1, 3, 1, 0, 0}; {5, 3, 1, 5, 1, 3, -2, 5, 6, -3, 0, 0}; {4, 6, -4, 4, -3, 6, 0, 6, 6, 3, 0, 0}; {-4, 0, 4, 3, -2, 3, -1, -2, -5, 0, 0, 0}; {-5, -5, -5, 2, 6, -2, 6, 4, -3, 6, 0, 0}; {-2, -4, 6, 0, 5, -3, -5, 3, -4, -1, 0, 0}; {1, -2, -5, 0, 5, 0, 3, 2, 4, 6, 0, 0}; {2, -3, 4, -4, -5, 6, -1, -1, 3, 5, 0, 0}; {4, 0, -4, 2, 1, 4, -4, 3, 5, 0, 0, 0}; {3, -2, 5, -2, 0, -2, -3, 3, 3, -2, 0, 0}; {5, -1, 5, -2, 0, 0, -1, 0, -4, 6, 0, 0}; {6, 1, -3, 3, -4, 0, 4, 6, 6, 5, 0, 0}; {6, 0, -5, 1, 0, 2, 0, 0, 5, 5, 0, 0}; {-1, 6, 2, -2, 3, -4, 0, 3, 3, 3, 0, 0}; {-1, 5, 0, -5, 3, 2, 2, -5, -2, 1, 0, 0}; {1, 6, 0, -5, 4, -2, 0, 3, 3, 3, 0, 0}; {0, 0, 1, 3, 11, 7, 11, 4, 5, 0, 0, 7}; {6, -3, 1, -5, -2, -5, 3, -4, 6, 1, 0, 0}; {0, 2, 5, -2, 5, 3, 3, -3, 4, 0, 0, 0}; {-4, 1, -5, 4, -4, -5, -4, -2, 5, 4, 0, 0}; {2, 4, -5, 1, 5, 0, -5, 5, 3, -1, 0, 0}; {0, 0, 1, 5, 9, 2, 10, 3, 0, 8, 4, 4}; {-2, -1, 1, -5, 3, 6, 2, 0, -1, 6, 0, 0}; {0, 0, 1, 6, 3, -1, 4, 6, 1, 5, 0, 0}; {-5, 1, -4, -5, -1, 5, -5, -5, -4, 2, 0, 0}; {1, -5, 2, 1, 5, 0, 1, -3, -5, -4, 0, 0}; {-4, 0, 5, 2, -3, -4, 4, -2, 1, 1, 0, 0}; {0, 0, 1, 6, 11, 3, 10, 7, 4, 11, 2, 1}; {5, -1, 6, 6, 5, 2, -5, 4, 6, -4, 0, 0}; {-2, -5, 5, -4, 4, 6, 1, 6, -4, -4, 0, 0}; {-4, 3, -1, 0, 6, 6, -1, 3, -1, -1, 0, 0}; {0, 0, 1, 9, 0, 1, 6, 1, 8, 8, 5, 0}; {0, 0, 1, 9, 2, 5, 4, 8, 5, 1, 0, 6}; {-1, -5, 4, -4, 3, 5, 0, 6, -5, -1, 0, 0}; {0, 0, 1, 10, 1, 8, 11, 3, 2, 8, 7, 2}; {2, -4, 3, -5, -5, 5, -2, 0, 4, 4, 0, 0}; {2, -4, 3, -5, -5, 5, -1, 0, 3, 4, 0, 0}; {0, 0, 2, 0, 8, 9, 6, 10, 3, 9, 9, 2}; {-3, 1, -5, -2, -2, 3, -1, 6, 5, 1, 0, 0}; {3, -4, 3, -4, 5, 5, 2, 2, -4, -3, 0, 0}; {-1, 0, 3, 4, -1, -5, 2, -5, 2, 3, 0, 0}; {-5, 0, -5, 1, 3, -4, -4, 2, 1, 0, 0, 0}; {4, -5, 0, 4, 2, 6, 3, -4, 6, 4, 0, 0}; {0, 4, -2, 4, -3, -4, -1, -2, 6, 5, 0, 0}; {5, -4, 1, 6, 1, -1, 1, 0, 6, 3, 0, 0}; {-1, 6, 3, 1, 6, -1, -2, 0, -5, -1, 0, 0}; {3, 6, -1, 5, 0, -2, 0, -2, -4, -5, 0, 0}; {3, -3, 5, 2, 2, -3, 1, -5, -3, -1, 0, 0}; {4, -5, 0, -5, -4, 0, 2, 1, 5, 1, 0, 0}; {-3, 0, 5, 0, -5, -3, -5, 3, 0, -2, 0, 0}; {0, 0, 2, 7, 6, 4, 11, 8, 5, 9, 4, 7}; {-3, 0, 5, 2, -5, 3, -1, -2, 2, 2, 0, 0}; {-1, -1, 1, -4, 6, -3, 3, -2, -1, 5, 0, 0}; {3, 6, -1, -2, 3, -5, 3, 1, -2, 2, 0, 0}; {3, -1, -3, 1, 2, 5, 3, -5, 1, 4, 0, 0}; {0, 0, 2, 10, 4, 0, 11, 9, 6, 0, 3, 5}; {4, -2, 6, -3, -4, 6, 1, 0, 3, 6, 0, 0}; {-1, 0, 3, 1, 0, -5, -2, 5, 1, 6, 0, 0}; {0, 0, 2, 11, 10, 4, 6, 9, 3, 8, 2, 9}; {0, 0, 2, 11, 11, 5, 6, 2, 5, 10, 6, 1}; {-5, -2, 4, 4, -2, 3, 0, -2, -4, 0, 0, 0}; {6, 6, -3, -5, 3, -2, 2, -4, 3, 5, 0, 0}; {0, -4, -5, 1, -5, -2, 5, -4, -5, -1, 0, 0}; {-4, 4, 3, -2, 1, 5, -1, -4, -1, -2, 0, 0}; {2, -5, 3, -4, 3, 3, 6, -5, 4, 5, 0, 0}; {0, 0, 3, 3, 7, 1, 5, 3, 1, 11, 7, 11}; {0, 0, 3, 3, 11, 8, 5, 7, 3, 6, 11, 4}; {1, 6, 2, -4, -2, 0, -2, -1, 4, 3, 0, 0}; {0, 0, 3, 4, 11, 1, 7, 10, 5, 11, 6, 3}; {2, -2, -3, -5, 0, 5, -4, -4, 1, -3, 0, 0}; {-3, 5, 4, 3, -3, 2, 5, -5, 0, -3, 0, 0}; {0, 0, 3, 6, 5, 2, 7, 4, 3, 1, 7, 0}; {-3, 1, -4, 3, 6, -2, -3, 5, 1, -1, 0, 0}; {-1, 2, -4, 2, -4, 6, 1, 2, -2, -2, 0, 0}; {-1, 2, -4, 2, -4, -4, -1, -2, 4, 2, 0, 0}; {0, 0, 3, 8, 2, 2, 9, 7, 6, 2, 6, 3}; {0, 0, 3, 8, 10, 7, 4, 3, 8, 4, 8, 6}; {3, 2, 4, -3, 6, -1, 5, 0, 1, 5, 0, 0}; {2, 1, 3, -4, 5, -2, 5, 0, 1, 5, 0, 0}; {-5, 3, 2, 5, 3, 0, 4, -3, 5, -4, 0, 0}; {-3, 0, 6, 5, 0, 2, -4, 4, -1, -1, 0, 0}; {0, 0, 4, 0, 6, 1, 9, 7, 6, 2, 5, 8}; {-2, 1, -4, -4, 4, -4, 3, -1, -4, -2, 0, 0}; {0, 0, 4, 1, 8, 3, 5, 3, 2, 9, 11, 4}; {5, 1, 1, 6, -1, 2, -2, -5, -3, -3, 0, 0}; {-5, 4, 5, -1, 6, -5, 1, 5, 5, -2, 0, 0}; {6, 3, 4, 0, 6, 4, -2, 4, 6, -2, 0, 0}; {-5,6,-3, -5, 3, -1, 2, -2, 3, 6, 0, 0}; {-2, 2, -2, 1, 5, -2, -2, 6, 4, -1, 0, 0}; {-5, -1, -5, -2, 4, -1, -4, 4, 5, 6, 0, 0}; {6, 6, -2, -3, 4, -2, 5, -3, 3, 3, 0, 0}; {3, 3, -5, -5, 1, -3, 3, -4, 2, 3, 0, 0}; {1, 4, -1, 4, -3, -3, 0, -2, 6, 2, 0, 0}; {6, 1, 0, -2, 3, -5, -2, -3, 2, -2, 0, 0}; {3, -5, 3, -1, -5, 6, 2, 5, -2, 0, 0, 0}; {0, 1, 6, -1, 6, 3, 4, -1, -2, 2, 0, 0}; {0, 0, 4, 8, 6, 2, 2, 11, 3, 4, 0, 5}; {-1, 6, 5, 4, -2, 1, -2, 0, 1, -4, 0, 0}; {6, -4, 2, -4, -1, 4, 1, -5, 3, 0, 0, 0}; {0,4, 0, -4, 2, -2, -2, 6, -4, 0, 0, 0}; {0, 0, 4, 8, 10, 3, 11, 4, 2, 2, 11, 6}; {-3, 1, -3, 6, -4, 6, 5, -1, -5, -4, 0, 0}; {1, 3, -3, 4, 6, -3, 2, 0, 5, 1, 0, 0}; {0, 0, 4, 10, 2, 4, 7, 6, 10, 7, 5, 3}; {1, 4, -1, -3, -1, -4, 5, -2, -2, -5, 0, 0}; {0, 0, 4, 11, 11, 0, 11, 9, 3, 5, 2, 8}; {5, 1, 2, 6, 0, 2, -2, 6, -3, -4, 0, 0}; {3, -3, -4, -1, 3, -2, -5, -5, -1, 4, 0, 0}; {0, 0, 5, 2, 1, 2, 1, 9, 6, 10, 3, 8}; {0, 0, 5, 2, 1, 5, 2, 5, 0, 10, 0, 7}; {2, -4, -5, -1, 2, -4, -4, 4, -1, 1, 0, 0}; {5, 2, 4, -1, 5, 6, 1, 5, 5, -3, 0, 0}; {5, 0, 0, 5, -4, 3, 5, 1, -3, 0, 0, 0}; {0, -3, -1, -5, 2, -3, -4, 3, -5, -2, 0, 0}; {0, -4, -3, 4, -2, -5, 1, 6, -5, -1, 0, 0}; {-3, -5, -2, -4, 4, -4, 1, 6, -4, 6, 0, 0}; {3, 6, 2, 5, -5, 2, -2, 5, 5, 5, 0, 0}; {2, -4, -5, 1, 1, -5, 2, 6, 1, 1, 0, 0}; {-4, 2, 1, -4, -2, 3, -3, 6, -2, 0, 0, 0}; {-5, 4, 6, 4, -3, 0, -4, 2, 2, -4, 0, 0}; {-3, -1, 6, -3, 1, 0, 4, 2, -5, 3, 0, 0}; {-1, 4, 2, -3, -4, 0, 6, -2, 2, 0, 0, 0}; {-1, 0, 6, -3, 6, -2, 6, -1, -4, 6, 0, 0}; {-3, -1, 6, -2, 3, 1, 0, 5, 3, -2, 0, 0}; {-4, -1, -5, 1, 0, 5, 0, 3, 5, 4, 0, 0}; {0, -1, 3, 5, 4, -1, 4, 5, 0, 4, 0, 0}; {-1, -1, 4, -5, -4, 3, -2, 1, -3, 2, 0, 0}; {2, -4, -4, -1, 2, -3, -4, 4, -1, 2, 0, 0}; {-3, -5, -1, -5, 4, 3, -1, 5, -2, 0, 0}; {-3, 1, -1, 1, 5, 1, -3, 5, 3, 4, 0, 0}; {-2, -3, 2, -1, 3, 4, -3, 2, 5, 2, 0, 0}; {-4, -5, 0, -2, -4, -3, 3, 6, 2, -5, 0, 0}; {0, 0, 6, 5, 8, 6, 6, 8, 1, 6, 11, 7}; {-5, 5, -3, 6, -4, 1, -3, 1, 4, 6, 0, 0}; {-4, 1, 0, 5, 1, 4, -2, 4, 4, 1, 0, 0}; {6, -3, 6, -3, 3, 6, -5, -1, -5, 4, 0, 0}; {4, 2, 6, 4, 6, 0, -4, 0, 3, 6, 0, 0}; {-4, 2, 2, -4, 6, -1, 4, -1, 0, 0, 0, 0}; {-4, 6, -2, -3, 1, -5, 0, 3, 6, 3, 0, 0}; {0, 0, 6, 7, 5, 5, 0, 4, 6, 3, 10, 4}; {-4, -1, -4, 1, -3, 2, 3, -3, 4, 3, 0, 0}; {4, -5, 4, -3, 2, 4, -2, -4, 4, 0, 0, 0}; {-2, 4, 4, 1, -2, 3, 4, -4, 1, -2, 0, 0}; {4, -5, 4, -2, -2, 3, -2, 1, 4, 3, 0, 0}; {0, 0, 6, 9, 6, 10, 5, 9, 8, 1, 11, 9}; {0, 0, 6, 9, 11, 3, 11, 3, 0, 1, 9, 4}; {0, 0, 6, 10, 2, 1, 4, 0, 8, 8, 11, 8}; {-2, -3, 2, 6, 1, -5, -3, 3, 1, -2, 0, 0}; {6, 4, -3, 2, -2, 5, 5, -2, 0, 3, 0, 0}; {4, 2, -5, 0, -3, 6, 0, 2, -4, 0, 0, 0}; {3, 0, 4, -2, 0, 6, 0, -3, -5, -3, 0, 0}; {0, 0, 7, 5, 0, 9, 2, 9, 3, 6, 4, 5}; {-3, 5, -4, 2, 2, -2, 2, -1, -4, -3, 0, 0}; {-2, -3, 3, 1, -4, -3, 4, -4, 2, -2, 0, 0}; {-1, 6, -4, 2, -5, 3, 0, -4, -3, -2, 0, 0}; {-3, 2, 2, 6, -1, -5, 3, 3, 0, 3, 0, 0}; {0, 0, 7, 6, 9, 3, 3, 1, 3, 5, 1, 5}; {-3, -5, 0, -2, 2, 4, -3, 2, 5, 2, 0, 0}; {1, -3, 0, -4, 1, -2, -4, 4, -5, -3, 0, 0}; {-3, 6, -2, -5, -4, 2, -2, 1, 4, 6, 0, 0}; {0, 0, 7, 8, 2, 1, 9, 4, 9, 7, 8, 10}; {0, 3, 1, 5, -2, 3, 4, -3, 5, 2, 0, 0}; {-2, 4, 5, 1, -2, 4, 4, -4, 1, -1, 0, 0}; {-5, 0, 0, -5, 4, -3, -5, -1, 3, 0, 0, 0}; {4, -1, 1, -2, 6, -3, -5, -1, -1, -5, 0, 0}; {-4, 0, -1, 6, 0, 1, -5, 3, 5, 1, 0, 0}; {0, 0, 7, 11, 5, 3, 6, 3, 0, 0, 4, 3}; {0, 0, -5, -1, 6, -4, 1, -3, 6, -1, 0, 0}; {0, 0, 7, 11, 10, 11, 4, 3, 7, 0, 8, 8}; {-4, 5, -2, 0, 6, -4, 5, 2, -3, 0, 0, 0}; {0, 4, 4, 2, 2, -3, -1, 4, -2, -5, 0, 0}; {0, 0, 8, 3, 3, 2, 4, 10, 2, 0, 8, 0}; {2, 1, -4, 2, 3, -3, 3, 6, 4, -2, 0, 0}; {4, 2, -4, 2, 5, 1, 6, 5, 5, 6, 0, 0}; {1, -3, 1, 6, 6, -3, 1, 0, -2, 3, 0, 0}; {2, -1, 4, -1, 6, 5, 1, 2, -4, -1, 0, 0}; {4, 2, -4, 4, 1, 5, -4, 4, 6, 0, 0, 0}; {1, -3, 1, -4, 0, -3, -3, 0, 6, 6, 0, 0}; {-3, 5, -3, 4, -2, -4, 6, 4, -5, -4, 0, 0}; {-2, -5, 0, -4, 6, 5, -4, -1, 5, -3, 0, 0}; {0, 0, 8, 8, 0, 10, 8, 2, 7, 2, 9, 0}; {3, -3, -1, 5, 5, 1, 5, 1, -3, -1, 0, 0}; {-4, -5, 2, 1, 6, -3, 3, -3, 1, -1, 0, 0}; {0, 0, 8, 8, 2, 8, 3, 10, 2, 0, 2, 4}; {6, -2, -2, 2, 3, -2, 3, -3, 3, 2, 0, 0}; {-5, 6, 1, 0, 2, -1, 4, -1, 2, -5, 0, 0}; {-2, 1, 0, 3, -3, -1, 5, -2, -5, 4, 0, 0}; {-3, 1, 1, 6, 3, -1, 4, 6, 3, 2, 0, 0}; {6, -1, 0, 6, 5, -4, 2, -3, 1, 0, 0, 0}; {-3, 3, 5, 0, -4, 1, -2, -4, -3, -4, 0, 0}; {-4, 0, 0, 6, 0, -5, -2, -4, -4, 5, 0, 0}; {0, 0, 8, 10, 0, 7, 2, 0, 4, 8, 6, 9}; {4, 1, 6, 5, -3, 5, -2, 2, 5, 2, 0, 0}; {0, 0, 8, 11, 9, 4, 11, 2, 6, 5, 5, 10}; {0, 0, 9, 0, 5, 10, 10, 10, 3, 11, 5, 3}; {-4, 6, 1, 2, -4, 4, -3, -1, 2, -1, 0, 0}; {-1, 5, -4, 6, 1, 6, 4, -4, -3, 3, 0, 0}; {0, 0, 9, 2, 3, 1, 9, 1, 10, 5, 6, 9}; {3, 3, 0, 5, -5, 4, -3, 2, 1, 6, 0, 0}; {-5, 2, 6, -5, -4, -2, 4, -3, 5, 3, 0, 0}; {0, 0, 9, 3, 10, 3, 4, 1, 4, 9, 10, 1}; {-5, 4, -2, 2, -3, -1, 3, 3, -1, -2, 0, 0}; {-2, -3, 5, -1, -2, 3, -4, 3, -5, 0, 0, 0}; {6, 5, 1, -5, -5, 0, 5, 1, 6, -1, 0, 0}; {5, 4, 0, -5, 3, -4, 2, 5, -4, 0, 0, 0}; {-1, 6, -2, 1, -3, -2, -5, 4, -5, -5, 0, 0}; {0, 0, 9, 5, 10, 0, 5, 1, 6, 6, 8, 4}; {3, -2, 2, 5, 5, 5, 6, 1, 6, 4, 0, 0}; {0, 0, 9, 5, 11, 11, 0, 4, 8, 3, 6, 7}; {-4, 3, -5, -1, -5, -4, 6, 4, -5, -5, 0, 0}; {3, -5, -4, -3, 3, -2, -5, 5, 0, 3, 0, 0}; {0, -5, -1, 4, 4, 0, 3, 1, -3, -3, 0, 0}; {0, 5, -5, -2, -1, -3, -4, 3, -3, 3, 0, 0}; {0, 0, 9, 8, 2, 5, 0, 6, 7, 11, 9, 2}; {-2, -2, -5, 6, 0, 5, -1, 4, -3, -3, 0, 0}; {2, -2, 3, -2, 4, 5, 2, 2, 5, 5, 0, 0}; {3, -3, 0, 6, 5, 1, 4, 1, -3, -2, 0, 0}; {2, -2, 3, -1, 6, 5, 1, 2, -4, -1, 0, 0}; {-5, -1, 0, 4, -2, 5, 2, 2, -2, 2, 0, 0}; {4, -5, -5, -1, 4, -1, 2, 0, -2, 5, 0, 0}; {1, 3, 2, 6, 0, -5, -1, -1, 5, 3, 0, 0}; {-5, 2, 6, 3, 4, 6, -1, 0, -3, 6, 0, 0}; {6, -3, -2, 3, -3, 4, -3, -2, 6, 2, 0, 0}; {-4, 0, 2, -3, 3, 0, 4, 6, 3, 1, 0, 0}; {0, 0, 10, 1, 8, 1, 4, 5, 10, 10, 4, 1}; {-4, 2, 6, 3, 4, 6, -1, 0, -3, 6, 0, 0}; {3, -2, 3, 2, -3, 2, 4, 5, -5, 1, 0, 0}; {0, 0, 10, 2, 3, 8, 9, 10, 6, 1, 7, 0}; {2, -4, 0, -2, 6, 6, 1, -4, -2, 0, 0}; {-1, -1, -3, 1, -5, 4, 1, -1, 5, -3, 0, 0}; {1, -4, 1, 0, 2, -2, 2, 5, -5, 4, 0, 0}; {4, -1, 4, 4, -1, 0, -4, 5, -2, 0, 0, 0}; {4, 0, 6, -5, 4, -5, -1, 4, 3, -2, 0, 0}; {1, 6, -3, -4, 2, 6, 2, -1, -2, 2, 0, 0}; {3, -1, 5, -5, 6, -1, 2, 1, 0, 4, 0, 0}; {0, 5, -4, -4, 1, 6, 1, -2, -3, 2, 0, 0}; {0, 0, 10, 5, 5, 10, 3, 9, 10, 10, 2, 9}; {5, 3, -1, 4, 4, -1, 4, -5, 5, -2, 0, 0}; {3, 0, -5, 0, -5, -2, 1, 0, 3, 4, 0, 0}; {1, -1, -5, 2, -4, -3, -2, 4, -4, 0, 0, 0}; {0, 0, 10, 7, 3, 8, 3, 7, 6, 8, 11, 4}; {-3, 4, -3, 1, 5, 2, -1, 0, -2, -4, 0, 0}; {-3, 6, 1, -5, 1, 1, -1, 2, 5, -1, 0, 0}; {5, -3, -1, 1, -2, 5, 2, 3, 0, 4, 0, 0}; {-5, 4, -1, 6, -3, 6, 5, 3, -5, -2, 0, 0}; {1, 0, -3, -4, 1, 5, -2, 5, -2, -3, 0, 0}; {0, 0, 10, 11, 0, 2, 6, 10, 8, 3, 10, 3}; {-2, 4, -4, 3, -4, -5, -1, -1, 3, 3, 0, 0}; {-4, 2, -5, 2, -3, 6, 5, -2, 0, 2, 0, 0}; {-1, 6, 0, -4, -4, 2, 6, -4, -2, 1, 0, 0}; {0, 0, 11, 1, 3, 9, 8, 5, 1, 6, 0, 8}; {6, 1, -5, 4, 4, -1, 3, -5, -4, 0, 0, 0}; {-4, 2, -5, 3, 4, 6, 0, 0, -3, -5, 0, 0}; {0, 0, 11, 4, 1, 7, 8, 1, 3, 9, 0, 9}; {-1, 4, -4, -5, 1, 4, 2, -1, -3, 2, 0, 0}; {-1, 1, 2, -2, 2, -1, 3, -3, 6, 5, 0, 0}; {0, 0, 11, 6, 1, 0, 4, 7, 10, 5, 8, 4}; {-5, 2, -4, -2, 1, 3, -3, 5, 1, 1, 0, 0}; {-5, 3, -2, 1, -4, -1, 3, 3, -1, -2, 0, 0}; {-4, 4, -1, 3, -2, 1, 3, 2, 4, 5, 0, 0}; {3, -3, 2, 4, -3, 5, 3, 4, -1, -2, 0, 0}; {0, 0, 11, 7, 8, 4, 11, 10, 2, 2, 9, 2}; {5, 2, -2, 3, 1, 1, -4, -2, 5, -3, 0, 0}; {6, 3, -1, 5, -5, 3, 6, 5, 5, -2, 0, 0}; {1, -4, 2, 6, -4, 3, 1, 0, -2, -3, 0, 0}; {-5, 4, 0, -5, -5, 5, -5, 2, 5, -2, 0, 0}; {2, -1, -5, 2, 6, 3, 2, 2, -5, -2, 0, 0}; {0, 0, 11, 9, 4, 9, 3, 9, 3, 4, 8, 8}; {5, 1, -4, 2, -4, -1, 1, 0, 3, 4, 0, 0}; {6, 0, 5, -3, 5, 5, 5, 3, -3, -4, 0, 0}; {-5, 1, 6, 0, -4, 5, 5, -3, 0, 1, 0, 0}; {2, -2, 5, 1, 2, -3, 1, 6, -4, -1, 0, 0}; and {1, -4, 2, -3, -1, -2, -3, 0, 5, 6, 0, 0}.

The first sequence set may further include some or all of the following 20 sequences (which are marked as a set 1b). PAPRs of sequences corresponding to these sequences are less than 2.5 dB. The 20 sequences are as follows:
{0, 0, 0, 0, 3, 6, 0, 10, 6, 3, 8, 1}; {0, 0, 1, 3, 3, 9, 6, 2, 4, 11, 2, 9}; {0, 0, 3, 0, 9, 4, 3, 3, 9, 1, 8, 0}; {0, 0, 3, 1, 10, 11, 8, 2, 6, 1, 2, 7}; {0, 0, 3, 1, 11, 6, 7, 1, 4, 11, 7, 11}; {0, 0, 3, 6, 10, 8, 8, 3, 11, 9, 0, 8}; {0, 0, 3, 7, 1, 4, 7, 6, 4, 0, 5, 2}; {0, 0, 4, 8, 8, 3, 9, 0, 7, 1, 10, 10}; {0, 0, 6, 5, 3, 5, 1, 5, 1, 8, 1, 2}; {0, 0, 6, 6, 1, 3, 4, 4, 5, 0, 6, 0}; {0, 0, 6, 8, 1, 3, 1, 4, 9, 5, 11, 8}; {0, 0, 7, 8, 8, 6, 2, 9, 6, 10, 3, 9}; {0, 0, 7, 8, 10, 9, 11, 2, 9, 1, 8, 4}; {0, 0, 8, 4, 4, 9, 3, 0, 5, 11, 2, 2}; {0, 0, 8, 5, 7, 10, 2, 10, 0, 11, 4, 11}; {0, 0, 8, 6, 9, 3, 11, 3, 4, 0, 4, 5}; {0, 0, 9, 1, 3, 9, 9, 9, 3, 0, 5, 0}; {0, 0, 10, 0, 7, 11, 7, 4, 11, 11, 2, 5}; {0, 0, 10, 11, 2, 7, 8, 2, 10, 2, 8, 4}; and {0, 0, 11, 6, 5, 0, 8, 1, 0, 4, 10, 1}.

The first sequence set may further include some or all of the following 3362 sequences (which are marked as seq22_lte_rm). PAPRs of sequences corresponding to sequences that are determined based on these sequences are less than 2.2 dB, and a largest value of a correlation with an LTE sequence is less than 0.79467. The 3362 sequences are as follows:
{0, 6, 0, 6, 1, 3, 3, 1, 6, 6, 0, 0}; {-5, -1, 3, -5, 1, -4, 3, -1, -3, -2, 0, 0}; {1, -5, 1, -5, 3, 4, 3, 2, 6, 6, 0, 0}; {6, -1, 4, -3, 5, -5, 6, 2, -4, -5, 0, 0}; {-3, 4, -1, 6, 4, -4, -2, 5, -5, 0, 0, 0}; {1,-5, 1, -5, 4, 4, 3, 2, -5, -4, 0, 0}; {-1, 4, -3, 2, -2, -3, -4, 6, -4, -4, 0, 0}; {-2, 3, -4, 1, -3, -4, -5, 5, -4, -4, 0, 0}; {-3, 4, -1, 6, 4, 5, -1, 1, -4, -2, 0, 0}; {1, -5, 1, -5, 4, 5, 3, 2, -5, -5, 0, 0}; {-1, 5, -1, 5, 2, 3, 3, 1, 5, 6, 0, 0}; {-1, 6, 1, -4, 6, -3, -2, 6, -5, 1, 0, 0}; {0, -4, 4, 0, -1, 3, 6, 2, 4, -1, 0, 0}; {-3, 4, -1, 6, 5, -4, -2, 5, -5, 1, 0, 0}; {1, -5, 1, -5, 5, 4, 3, 2, -5, -4, 0, 0}; {-2,3,-4, 1, -2, -4, -5, 5, -4, -4, 0, 0}; {1, 6, -1, 4, 1, 0, -4, 6, -1, -2, 0, 0}; {1, -5, 1, -5, 5, 5, 3, 3, -5, -5, 0, 0}; {-1, 5, -1, 5, 3, 3, 2, 2, 6, -5, 0, 0}; {-3, 3, -3, 3, 1, 2, 2, 0, 5, 6, 0, 0}; {5, -2, 3, -4, -4, 6, 5, 4, -4, -5, 0, 0}; {-2, 5, 0, -5, -3, 3, -5, -5, 6, -5, 0, 0}; {-4, 3, -2, 5, -4, -5, -5, -2, 4, 5, 0, 0}; {4, -3, 2, -5, -4, 5, 3, -5, 6, -1, 0, 0}; {3, -4, 1, 6, -5, 4, 2, -5, 5, -1, 0, 0}; {-4, 3, -2, 5, -4, -5, -4, -2, 4, 4, 0, 0}; {6, 0, 6, 0, 2, 0, 0, 1, 6, 6, 0, 0}; {-5, 2, -3, 4, -5, -5, -5, -3, 4, 5, 0, 0}; {5, -1, 5, -1, 1, 0, 0, 0, 5, 5, 0, 0}; {-2, 5, 0, -5, -2, 3, -5, -5, 6, -5, 0, 0}; {-3, 4, -1, 6, -3, 2, 6, 6, 5, 6, 0, 0}; {-3, 4, -1, 6, -3, 2, 6, -5, 6, 6, 0, 0}; {3, -4, 1, 6, -4, 4, 2, -5, 5, 0, 0, 0}; {6, 1, -4, 3, -5, 5, 6, -2, 4, 5, 0, 0}; {6, 1, -4, 3, -5, 6, 6, -2, 2, 4, 0, 0}; {5, -1, 5, -1, 2, 0, -1, 2, 4, 5, 0, 0}; {0, 4, -4, 0, 1, -3, 6, -2, -4, 1, 0, 0}; {6, 1, -4, 3, -5, 6, -5, -3, 5, 5, 0, 0}; {4, -2, 4, -2, 1, -1, -1, 0, -5, 6, 0, 0}; {1, 6, -1, 4, 6, 3, 2, 6, 5, -1, 0, 0}; {1, -5, 1, -5, -2, -3, -3, -1, -5, 6, 0, 0}; {-3, 4, -1, 6, -2, 2, 5, 6, 5, 5, 0, 0}; {3, -3, 3, -3, 1, -1, -2, 1, 4, 5, 0, 0}; {0, 6, 0, 6, -2, -3, -2, -1, 4, 4, 0, 0}; {-1, 5, -1, 5, -3, -4, -3, -2, 6, 6, 0, 0}; {-4, 2, -4, 3, -4, -5, -5, -2, 2, 3, 0, 0}; {1, -4, 3, -1, 5, -3, 1, 5, 5, 4, 0, 0}; {6, 0, 6, 1, -5, 6, 6, -2, 1, 3, 0, 0}; {-1, 5, -1, 6, 0, 2, 3, 1, 4, 5, 0, 0}; {-2, 4, -2, 5, 0, 0, 4, 5, 0, 1, 0, 0}; {-4, 2, -4, 3, -1, 1, 2, 0, 4, 5, 0, 0}; {-5, 1, -5, 2, -2, 0, 2, 1, 3, 5, 0, 0}; {6, 0, 6, 1, -2, 0, 1, -2, -5, -5, 0, 0}; {4, -3, 2, -4, 4, 5, 5, 2, -5, -5, 0, 0}; {3, -4, 1, -5, 3, 5, 4, 1, -3, -4, 0, 0}; {0, 5, -2, 4, 0, -3, 3, 3, 4, 4, 0, 0}; {2, 5, -4, 0, 6, 4, 5, 1, -3, 2, 0, 0}; {4, -3, 2, -4, 4, 4, -4, -5, 2, 0, 0, 0}; {6, 0, 6, 1, -1, 0, 1, 0, 4, 6, 0, 0}; {3, -4, 1, -5, 4, 5, 5, 1, -1, -4, 0, 0}; {-5, 1, -5, 2, 0, 0, 1, 0, 4, 6, 0, 0}; {-1, 3, -5, 0, -3, -3, -4, 4, 0, -3, 0, 0}; {-2, 2, 6, -1, -4, -3, -5, 3, 0, -3, 0, 0}; {-5, 1, -5, 2, 1, -5, -3, 0, 1, 2, 0, 0}; {4, -4, 0, 5, 3, -5, 5, -4, 6, 3, 0, 0}; {1, 0, -1, -1, 5, -2, 4, 1, -5, -4, 0, 0}; {5, -1, 5, 0, 1, -5, -2, -3, -5, 0, 0, 0}; {4, -1, 6, 2, 5, 6, 6, -4, 3, 4, 0, 0}; {2, -4, 2, -3, -1, -1, -1, -1, 6, 5, 0, 0}; {-2, 2, 6, -1, 0,

-3, 5, -2, -5, 1, 0, 0}; {1, -5, 1, -4, -1, -2, -2, -1, 5, 5, 0, 0}; {3, -2, 5, 1, 5, 5, 6, -4, 4, 4, 0, 0}; {1, -5, 1, -4, -1, -2, -2, -1, 6, 5, 0, 0}; {2, -3, 4, 0, 4, 4, 5, -5, 4, 4, 0, 0}; {0, 6, 0, -5, -2, -3, -3, -1, 6, 5, 0, 0}; {1, -4, 3, -1, 3, 3, 4, -5, 4, 4, 0, 0}; {-3, 3, -3, 4, -5, -5, -3, -3, 6, 5, 0, 0}; {-1, 5, -1, 6, -3, -3, -3, -2, 6, 5, 0, 0}; {0, -5, 2, -2, 2, 3, 5, -5, 2, 2, 0, 0}; {-4, 0, 4, -3, -1, -5, 4, -3, -5, 0, 0, 0}; {-1, 5, -1, 6, -2, -4, -4, -1, 6, 6, 0, 0}; {-2, 4, -2, 5, -3, -5, -4, -2, 5, 5, 0, 0}; {-2, 4, -2, 5, -3, -5, -4, -2, 6, 6, 0, 0}; {0, 6, 0, -5, -1, -2, -3, 0, 4, 5, 0, 0}; {1, -4, 3, -1, 4, 4, 4, -4, 1, 3, 0, 0}; {-1, 5, -1, 6, -2, -3, -3, -1, 4, 5, 0, 0}; {3, -2, 5, 1, 6, -2, 0, -2, 2, 3, 0, 0}; {4, -1, 6, 2, -5, -1, 3, 6, 5, 4, 0, 0}; {6, -1, 4, -1, 2, 1, 0, 1, 6, 5, 0, 0}; {6, -1, 4, -1, 2, 1, 0, 1, -5, 6, 0, 0}; {6, 0, 6, 2, 6, 6, -5, -3, 4, 4, 0, 0}; {6, 0, 6, 2, 6, 6, -5, -3, 5, 5, 0, 0}; {0, 6, 0, -4, 0, 3, 6, -4, 6, 4, 0, 0}; {6, 0, 6, 2, -5, 6, -5, -2, 2, 3, 0, 0}; {4, -4, 0, 6, -3, 6, 2, -4, 6, 0, 0, 0}; {3, -3, 3, -1, 4, 4, 6, -4, 2, 3, 0, 0}; {1, 6, -1, 6, -2, -3, -1, -1, 4, 4, 0, 0}; {3, -4, 1, -4, 3, 5, 5, 1, -2, -4, 0, 0}; {1, 6, -1, 6, 2, 3, 4, 0, -2, -4, 0, 0}; {0, 5, -2, 5, 1, 3, 4, 0, -2, -4, 0, 0}; {-1,3,-5, 1, -4, -2, -4, 3, -1, -3, 0, 0}; {5, -3, 1, -5, 2, -1, 4, 4, 5, 3, 0, 0}; {3, -5, -1, 5, 1, -1, 5, 3, 5, 2, 0, 0}; {-2, 2, 6, 0, -4, -4, -4, 4, 0, -3, 0, 0}; {2, -4, 2, -2, -4, -1, -1, -2, 6, -5, 0, 0}; {-1, 5, -1, -5, 5, -3, -1, -1, 2, 4, 0, 0}; {2, 6, -2, 4, 1, 6, 4, -5, 5, 3, 0, 0}; {2, 6, -2, 4, 1, 6, -5, 5, 1, -1, 0, 0}; {1, 5, -3, 3, 1, 5, 4, 6, 5, 4, 0, 0}; {6, 1, -4, 5, -5, 1, 6, 6, 5, -5, 0, 0}; {4, -2, 4, 0, 1, -5, -2, -3, -5, -3, 0, 0}; {3, -3, 3, -1, 0, 6, -2, -3, -5, -3, 0, 0}; {2, -4, 2, -2, -1, 6, -4, -3, -5, -4, 0, 0}; {-5, 0, 5, 0, 1, 0, 1, 0, -5, -5, 0, 0}; {-1, 6, 1, -2, 1, 2, 4, -5, 3, 4, 0, 0}; {4, -1, 6, 3, 6, -1, 5, 5, 4, 5, 0, 0}; {-3, 1, 5, -1, -1, 4, 2, 6, 4, 1, 0, 0}; {-4, 2, -4, 4, -5, 6, -4, -3, 5, 5, 0, 0}; {-4, 2, -4, 4, -5, 6, -4, -2, 5, 5, 0, 0}; {-5, 1, -5, 3, 6, 5, -5, -3, 5, 5, 0, 0}; {-5, 1, -5, 3, 6, 5, -4, -3, 4, 4, 0, 0}; {6, -3, 0, 5, 5, 1, -4, 1, -3, 1, 0, 0}; {-1, 5, -1, -5, -2, -3, -3, -1, 5, 5, 0, 0}; {0, -5, 2, -1, 3, 3, 4, -5, 3, 4, 0, 0}; {0, -5, 2, -1, 3, 3, 5, -5, 3, 3, 0, 0}; {-5, 1, -5, 3, 6, 6, -4, -3, 5, 4, 0, 0}; {-1, 5, -1, -5, -2, -2, -3, -1, 5, 5, 0, 0}; {-1, 6, 1, -2, 2, 3, 4, -5, 2, 3, 0, 0}; {3, -2, 5, 2, 6, -2, 4, 5, 4, 5, 0, 0}; {6, -1, 4, 0, 2, -4, -4, 2, 0, -2, 0, 0}; {-4, 3, -2, -4, 0, 0, 3, 6, 2, 3, 0, 0}; {1, -4, 3, 1, 5, -4, 1, 5, 3, 3, 0, 0}; {-3, 2, -5, 3, 6, -2, -3, 4, 1, -1, 0, 0}; {4, -2, 4, 1, 5, 4, 6, -4, 4, 4, 0, 0}; {5, -1, 5, 2, 6, 5, -4, -3, 4, 3, 0, 0}; {5, -1, 5, 2, 6, 6, 6, -3, 4, 4, 0, 0}; {4,-2,4, 1, 5, 5, 6, -4, 3, 4, 0, 0}; {2, -5, 0, -4, -1, -2, -1, -1, 5, 5, 0, 0}; {2, -4, 2, -1, 3, 3, 5, -5, 3, 4, 0, 0}; {5, 0, -5, 5, -1, 4, -5, 5, 6, 1, 0, 0}; {3, -3, 3, 0, 5, 4, 5, -4, 4, 4, 0, 0}; {-2, 1, 4, -2, 3, 1, 4, -5, 4, 1, 0, 0}; {0, 4, -4, 3, -3, -4, 1, 1, 3, 0, 0, 0}; {-5, 1, -5, 4, 0, 2, 2, -5, -3, 2, 0, 0}; {2, -5, 0, -4, 4, 3, -5, -1, 0, 1, 0, 0}; {-1, 3, -5, 2, -3, -4, -1, 3, 2, 0, 0, 0}; {-1, 4, -3, 5, 1, 3, 4, -1, -2, -4, 0, 0}; {1, -5, 1, -2, -4, -5, 1, 6, -3, -1, 0, 0}; {-3, 0, 3, -3, 4, 1, -4, 4, 5, 1, 0, 0}; {-4, 1, 6, 2, 1, -3, 1, -2, -4, -3, 0, 0}; {3, -3, 3, 0, 0, -5, -2, -3, -5, -3, 0, 0}; {6, 2, -2, -2, 3, -2, 2, 2, 5, 0, 0, 0}; {2, -5, 0, -3, -1, 6, 6, 0, -1, -3, 0, 0}; {-4, 4, 0, 0, 5, -5, -2, 2, -1, 1, 0, 0}; {4, 1, -2, -1, 6, 1, -5, -3, 0, -3, 0, 0}; {3, -1, -5, -5, 1, -4, 0, 1, 3, -1, 0, 0}; {2, -5, 0, -3, 0, 6, 6, 1, -1, -3, 0, 0}; {4, -1, 6, 5, -2, -2, 2, 5, 2, 2, 0, 0}; {3, -1, -5, -5, 2, -4, 0, 1, 3, -1, 0, 0}; {1, -4, 3, 2, -4, 1, 5, 4, 5, 0, 0, 0}; {1, -3, 5, 5, 0, 6, -1, 2, 3, -2, 0, 0}; {2, -2, 6, 6, 1, -4, 0, 1, 3, -1, 0, 0}; {0, -5, 2, 1, -5, 1, 4, 4, 5,

1, 0, 0}; {-1, -5, 3, 3, -1, 5, -2, -1, 2, -2, 0, 0}; {-2, 5, 0, -1, 6, 0, 3, 3, 5, 0, 0, 0}; {-1, 4, -3, 6, 0, -3, 6, 6, -1, 1, 0, 0}; {-4, 4, 0, 0, -2, 2, -2, 2, 4, -4, 0, 0}; {-5, 3, -1, -1, -3, 2, -2, 2, 4, -3, 0, 0}; {6, 1, -4, -5, 4, -3, 4, 6, 6, -1, 0, 0}; {-3, 1, 5, 1, -4, 6, -2, 2, 2, 0, 0, 0}; {-1, 4, -3, 6, 2, 1, 6, -3, 0, -1, 0, 0}; {-2, 3, -4, 5, 1, 0, 6, -3, 0, -1, 0, 0}; {-4, 0, 4, 0, -5, 6, -2, 2, 1, 0, 0, 0}; {2, 4, 6, 0, -5, 3, 5, -3, 4, 1, 0, 0}; {6, -1, 4, 1, 0, -5, -1, -2, -4, -3, 0, 0}; {5, 5, 5, -2, 6, 2, 6, -4, 3, 6, 0, 0}; {2, -2, 6, -5, 0, -4, 0, 1, 4, 0, 0, 0}; {-4,-3,-2,4,2,-4, 2, -3, 0, 4, 0, 0}; {1, -4, 3, 3, -5, -4, 0, 4, 1, 2, 0, 0}; {0, -5, 2, 2, -5, 1, 4, 5, 6, 1, 0, 0}; {-1, 6, 1, 1, 6, 0, 3, 5, 5, 0, 0, 0}; {-2, 4, -2, -3, 1, 6, -3, -5, -5, 1, 0, 0}; {-1, 6, 1, 1, 6, 0, 4, 4, 6, 0, 0, 0}; {0, -4, 4, 5, -1, 6, -1, 0, 3, -1, 0, 0}; {-3, 4, -1, -1, 4, -2, 2, 4, 4, -1, 0, 0}; {-3, 4, -1, -1, 4, -1, 3, 4, 4, 0, 0, 0}; {-2, 5, 0, 0, 5, 0, 3, 3, 5, -1, 0, 0}; {-1, 6, 1, 1, 6, 1, 4, 4, 6, 1, 0, 0}; {0, -4, 4, 5, -1, -5, -1, 1, 2, -1, 0, 0}; {6, 2, -2, -1, 5, 5, -1, 3, -1, -1, 0, 0}; {-3, 4, -1, -1, 5, -2, 3, 3, 4, -1, 0, 0}; {-3, 4, -1, -1, 5, -1, 3, 3, 5, 0, 0, 0}; {-2, 6, 2, 3, -2, 5, -2, 0, 2, -2, 0, 0}; {-4, 3, -2, -2, 4, -2, 2, 3, 4, 0, 0, 0}; {-4, 3, -2, -2, 4, -2, 3, 3, 5, -1, 0, 0}; {-4, 2, -4, -5, 0, 5, -5, -5, -4, 2, 0, 0}; {6, 0, 6, 5, -2, 4, 6, 6, -5, 1, 0, 0}; {-5, 2, -3, -3, 3, -2, 2, 2, 4, -1, 0, 0}; {-4, 3, -2, -2, 5, -2, 2, 3, 5, 0, 0, 0}; {-5, 2, -3, -3, 4, -3, 2, 2, 5, -1, 0, 0}; {-5, 2, -3, -3, 4, -2, 1, 2, 4, -1, 0, 0}; {5, -1, 5, 4, -2, 3, 6, 5, 6, 0, 0, 0}; {6, 0, 6, 5, -1, 4, -5, -5, -5, 1, 0, 0}; {6, 1, -4, -4, 3, -3, 1, 2, 4, -1, 0, 0}; {6, 1, -4, -4, 3, -3, 1, 3, 4, -1, 0, 0}; {6, 1, -4, -4, 3, -2, 1, 2, 5, -1, 0, 0}; {-2, 1, 4, 0, 5, 1, 6, 4, 4, 4, 0, 0}; {1, -5, 1, 0, -4, 1, -4, -4, -4, 1, 0, 0}; {-3, 1, 5, 2, -3, 6, -2, 1, 2, 1, 0, 0}; {0, 2, 4, -1, 5, 2, -3, 4, 6, 1, 0, 0}; {-5, 1, -5, 6, 6, 2, -5, 6, 5, -4, 0, 0}; {2, 0, -2, 2, -5, -2, 3, -3, 6, -1, 0, 0}; {-1, -5, 3, 5, -2, 6, -2, 1, 2, -2, 0, 0}; {-5, 1, -5, -5, -1, 4, -4, -5, -5, 1, 0, 0}; {-5, 2, -3, -2, 3, -3, 2, 2, 3, 4, -1, 0, 0}; {-4, 3, -2, -1, 4, -1, 2, 3, 5, 0, 0, 0}; {5, -1, 5, 5, -2, 4, 6, 6, 6, 1, 0, 0}; {3, -4, 1, 0, 4, -3, -2, -3, -3, 2, 0, 0}; {-2, 4, -2, -2, 3, 1, 6, -4, 3, 1, 0, 0}; {2, -4, 2, 2, -3, -1, 6, 4, -3, -1, 0, 0}; {-1, 5, -1, -1, 6, -1, -4, -5, -5, 0, 0, 0}; {-4, 1, 6, 5, -1, 3, 0, -2, -3, 1, 0, 0}; {-5, 1, -5, -5, 2, -4, 6, 6, 6, -1, 0, 0}; {-4, 1, 6, 5, 0, 4, -1, -2, -3, 1, 0, 0}; {5, -2, 3, 2, -3, 2, -1, -3, -4, 1, 0, 0}; {4, -3, 2, 1, -4, 1, -2, -3, -5, 0, 0, 0}; {5, -2, 3, 2, -3, 3, -2, -3, -4, 1, 0, 0}; {5, -1, 5, 5, 1, -4, 4, 5, 5, -1, 0, 0}; {1, 0, -1, 5, 0, 4, -2, 4, 4, -3, 0, 0}; {3, -1, -5, -2, 3, 6, 2, -1, -2, -1, 0, 0}; {-1, 5, -1, 0, 4, -1, 4, 4, 4, -1, 0, 0}; {-4, 1, 6, 6, -1, 3, 0, -1, -4, 1, 0, 0}; {6, -1, 4, 4, -3, 2, -1, -2, -5, 1, 0, 0}; {5, -2, 3, 3, -4, 2, -1, -2, -4, 1, 0, 0}; {6, -1, 4, 4, -3, 3, -1, -3, -4, 1, 0, 0}; {6, -1, 4, 4, -3, 3, -1, -2, -4, 1, 0, 0}; {6, 0, 6, -5, 1, -4, 5, 5, 5, -1, 0, 0}; {-5, 1, -5, -4, 2, -3, 6, -5, 6, 0, 0, 0}; {4, -3, 2, 2, -5, 2, -2, -3, -5, 0, 0, 0}; {5, -2, 3, 3, -4, 3, -2, -2, -5, 1, 0, 0}; {6, -1, 4, 4, -2, 2, -1, -3, -4, 0, 0, 0}; {6, 0, 6, -5, 2, -4, 6, 6, 5, -1, 0, 0}; {5, -2, 3, 3, -3, 2, -2, -2, -4, 1, 0, 0}; {2, 6, -2, -3, 2, -5, 2, 0, -2, 2, 0, 0}; {4, -3, 2, 2, -4, 2, -2, -3, -4, 0, 0, 0}; {3, -4, 1, 1, -5, 1, -3, -3, -5, 0, 0, 0}; {4, -3, 2, 2, -4, 2, -3, -3, -5, 1, 0, 0}; {3, -4, 1, 1, -5, 2, -3, -3, -4, 1, 0, 0}; {2, 6, -2, -3, 3, -5, 2, 0, -2, 2, 0, 0}; {3, -4, 1, 1, -4, 1, -3, -4, -4, 0, 0, 0}; {2, -5, 0, 0, -5, 0, -3, -4, -5, -1, 0, 0}; {2, -5, 0, 0, -5, 0, -3, -4, -5, 0, 0, 0}; {0, 4, -4, -5, 1, 5, 1, -1, -2, 1, 0, 0}; {1, 6, -1, -1, 6, -1, -4, -4, 6, -1, 0, 0}; {2, -5, 0, 0, -5, 0, -3, -3, -5, 1, 0, 0}; {0, 4, -4, -5, 1, 5, 2, 0, -3, 2, 0, 0}; {3, -4,

1, 1, -4, 2, -2, -4, -4, 1, 0, 0}; {0, 4, -4, -5, 1, 6, 1, 0, -3, 1, 0, 0}; {1, 6, -1, -1, 6, 0, -4, -4, 6, 0, 0, 0}; {2, -4, 2, 3, -1, 6, 3, 5, 5, -1, 0, 0}; {1, 6, -1, -1, 6, 0, -3, -5, -5, 0, 0, 0}; {0, 5, -2, -2, 5, -1, -4, -5, 6, -1, 0, 0}; {-1, 4, -3, -3, 5, 4, 0, -4, -1, -2, 0, 0}; {-2, 2, 6, 5, 0, 4, 0, -1, -4, 0, 0, 0}; {6, 4, 2, -4, 0, -4, 0, 1, 2, -5, 0, 0}; {-5, 5, 3, -3, 2, -2, 0, 0, 6, -3, 0, 0}; {-3, -5, 5, -1, 5, -3, 6, 3, -5, -2, 0, 0}; {4, 0, -4, 0, 5, 6, 2, -2, -1, 0, 0, 0}; {3, -1, -5, -1, 4, 6, 2, -2, -2, 0, 0, 0}; {1, -3, 5, -3, 4, -4, 0, 2, -2, -2, 0, 0}; {2, -5, 0, 1, 6, 0, -3, -3, -5, 0, 0, 0}; {1, 5, -3, -3, 1, -5, 2, 1, -2, 2, 0, 0}; {-4, 4, 0, 4, 1, 3, -2, 0, -5, -4, 0, 0}; {0, 4, -4, -4, 1, 6, 1, -1, -3, 1, 0, 0}; {1, 6, -1, 0, 6, 0, -3, -4, -5, 0, 0, 0}; {0, 5, -2, -1, 5, -1, -4, -4, -5, -1, 0, 0}; {-2, 2, 6, 6, -1, 4, 0, -1, -3, 1, 0, 0}; {-1, 4, -3, -2, 4, -1, -5, -4, -5, 0, 0, 0}; {-3, 1, 5, 5, -2, 4, 0, -1, -3, 1, 0, 0}; {-4, -1, 2, 1, 6, -1, 5, 3, 0, 3, 0, 0}; {-4, 1, 6, -5, 2, 2, -2, -5, -2, -2, 0, 0}; {-1, 3, -5, -5, 1, 5, 1, -1, -3, 1, 0, 0}; {0, 5, -2, -1, 6, -1, -4, -5, -5, -1, 0, 0}; {-3, 1, 5, 5, -1, 4, 0, -1, -3, 1, 0, 0}; {6, -2, 2, 2, -3, 2, -2, -2, -5, 0, 0, 0}; {4, -3, 2, 4, 0, 0, -3, 6, -2, -3, 0, 0}; {3, 0, -3, 3, -4, 3, 2, 2, -5, -1, 0, 0}; {4, -1, 6, -2, 1, -3, -2, 4, 3, -2, 0, 0}; {1, -3, 5, -2, 3, 4, 1, -3, -2, 0, 0, 0}; {-3, 4, -1, 3, -4, -4, 5, 0, 0, 1, 0, 0}; {0, -4, 4, -3, 3, 4, -1, -1, -3, 0, 0, 0}; {3, 0, -3, 3, -2, -1, -5, -3, 6, -2, 0, 0}; {-5, 0, 5, -5, 1, -4, 5, -5, 6, -1, 0, 0}; {-3, 3, -3, 0, -5, -4, -5, 4, -4, -4, 0, 0}; {5, -4, -1, -1, 4, -3, 4, 2, -1, 2, 0, 0}; {6, 2, -2, 3, 1, 2, -3, -1, 6, -4, 0, 0}; {-2, 4, -2, 1, -3, -3, -5, 5, -3, -4, 0, 0}; {-5, 1, -5, -2, 6, -5, 4, 3, -4, -3, 0, 0}; {-4, 2, -4, -1, -5, -4, 6, 4, -4, -4, 0, 0}; {6, 0, 6, -2, 6, 6, 5, 3, -5, -5, 0, 0}; {6, 1, -4, 1, -1, 0, 0, -1, 5, 6, 0, 0}; {6, 0, 6, -2, -5, -5, 5, 3, -4, -4, 0, 0}; {5, -1, 5, -3, 6, 6, 4, 3, -5, -4, 0, 0}; {5, -1, 5, -3, 6, 6, 4, 3, -4, -4, 0, 0}; {5, -1, 5, -3, 6, -5, 5, 3, -5, -5, 0, 0}; {4, -2, 4, -4, 5, 6, 4, 2, -5, -5, 0, 0}; {6, 3, 0, -5, -5, -1, 4, -1, 3, -1, 0, 0}; {5, -1, 5, -3, 6, -5, 4, 3, -4, -4, 0, 0}; {6, 1, -4, 1, 0, -1, 0, -1, 5, -5, 0, 0}; {3, -4, 1, 4, 1, -1, -3, 6, -3, -3, 0, 0}; {-1, 1, 3, 3, -3, 4, -1, -5, 3, 3, 0, 0}; {4, -2, 4, -4, 6, 6, 4, 3, -5, -5, 0, 0}; {1, 6, -1, 2, -1, -2, -4, 5, -3, -4, 0, 0}; {4, -1, 6, -1, -1, -2, -1, -1, 4, 6, 0, 0}; {3, -3, 3, -5, 6, 5, 4, 2, -5, -5, 0, 0}; {1, 6, -1, 2, 1, -3, -5, -2, -3, 2, 0, 0}; {5, 0, -5, 0, 1, 0, -5, -3, 0, 3, 0, 0}; {0, 6, 0, 4, 5, 2, 2, 1, -4, -4, 0, 0}; {-3, 5, 1, -5, -1, 1, -5, -3, -5, -2, 0, 0}; {2, -2, 6, 0, 4, -2, 2, 3, 4, 4, 0, 0}; {4, 0, -4, 2, 6, 0, 3, 4, 4, 5, 0, 0}; {1, -5, 1, 5, -5, 3, 1, 1, -2, -4, 0, 0}; {-2, 3, -4, -1, 0, -4, 6, 4, -1, -2, 0, 0}; {2, -2, 6, 0, 4, 4, 4, -4, 0, 3, 0, 0}; {1, -3, 5, -1, 4, 2, 4, -3, 1, 3, 0, 0}; {-5, 1, -5, -1, 2, 0, 0, 0, -4, -5, 0, 0}; {-3, 4, -1, 4, -1, 1, 3, 2, 4, 5, 0, 0}; {6, 0, 6, -2, 4, 5, -4, -5, 3, 0, 0, 0}; {-4, 4, 0, 6, 3, 6, -2, 4, 6, 0, 0, 0}; {-5, 1, -5, -1, 6, -5, 6, 4, -5, -5, 0, 0}; {6, 0, 6, -2, 5, 6, 5, 3, -5, -5, 0, 0}; {5, 0, -5, 1, -3, -2, 2, 4, -2, 0, 0, 0}; {3, -3, 3, -4, 3, 4, 4, 2, 6, 6, 0, 0}; {3, -3, 3, -4, 3, 5, 5, 2, -5, -5, 0, 0}; {2, -4, 2, -5, 3, 4, 4, 2, 6, 6, 0, 0}; {2, -4, 2, -5, 3, 5, 4, 2, -5, -5, 0, 0}; {4, 0, -4, 3, 1, 5, -4, 3, 5, 0, 0, 0}; {-2, 4, -2, 3, 0, -4, 4, 3, -1, 0, 0, 0}; {-4, 3, -2, 4, 2, 2, -1, 0, 6, -4, 0, 0}; {4, -2, 4, -3, 6, 6, 4, 3, -4, -4, 0, 0}; {3, -3, 3, -4, 5, 5, 3, 3, 6, -5, 0, 0}; {3, -3, 3, -4, 5, 5, 4, 3, -5, -5, 0, 0}; {2, -4, 2, -5, 4, 4, 4, 2, 6, -5, 0, 0}; {5, -1, 5, -2, -5, -5, 4, 3, -4, -4, 0, 0}; {5, -1, 5, -2, -5, -5, 4, 3, -3, -3, 0, 0}; {3, -3, 3, -4, 5, 6, 4, 3, -5, -5, 0, 0}; {-1, 4, -3, 1, -3, -3, -4, 5, -4, -4, 0, 0}; {0, 6, 0, 5, 2, 3, 3, 1, 6, -5, 0, 0}; {2, -2, 6, 1, 0, 3, -5, 2, 5, -1, 0, 0}; {1, 6, -1, 3, 0, -2, -4, 6, -3, -4, 0, 0}; {-4, -2, 0, 1, -5, 2, -3, 6, 2, 3, 0, 0}; {2, -4, 2, -5, 5, 4, 4, 2, 6, -5, 0, 0}; {4, -1, 6, 0, -1, 0, -2, -1, 6, -5, 0, 0}; {2, -4, 2, -5, 5, 5, 3, 3, -5, -5, 0, 0}; {-3, 5, 1, -4, -3, 6, -2, 2, 4, -1, 0, 0}; {0, 6, 0, 5, 5, 3, 2, 2, -4, -4, 0, 0}; {-2, 3, -4, 0, -1, -4, -5, 5, -3, -4, 0, 0}; {-1, 5, -1, 4, 4, 3, 3, 1, 6, 6, 0, 0}; {2, -3, 4, -2, 0, 6, -2, -3, -5, -3, 0, 0}; {6, -2, 2, 5, 4, -1, -3, 0, -2, 2, 0, 0}; {1, -3, 5, 0, 3, 3, 4, -4, 0, 3, 0, 0}; {-5, 1, -5, 0, 2, -1, -1, 4, 3, -2, 0, 0}; {-3, 3, -3, 2, 4, 1, 1, 1, -4, -5, 0, 0}; {-4, 2, -4, 1, 3, 0, 0, 1, -4, -4, 0, 0}; {-1, 6, 1, -5, -2, -4, -3, -1, 3, 4, 0, 0}; {-3, 4, -1, 5, -4, -5, -5, -1, 1, 4, 0, 0}; {-4, 2, -4, 1, 3, 1, 0, 1, -4, -5, 0, 0}; {-3, 3, -3, 2, 4, 2, 1, 2, 6, 6, 0, 0}; {-5, 1, -5, 0, 2, 0, 0, 0, -5, -5, 0, 0}; {-5, 1, -5, 0, 2, 0, 0, 0, -4, -5, 0, 0}; {-4, 3, -2, 4, -4, -5, -5, -2, 5, 5, 0, 0}; {6, 0, 6, -1, 2, 0, 0, 0, -4, -5, 0, 0}; {-3, 4, -1, 5, -3, -5, -4, -1, 3, 4, 0, 0}; {5, -2, 4, -4, 1, -1, 0, 0, -4, -4, 0, 0}; {-1, 5, 0, 5, 2, 3, 2, 1, -5, -5, 0, 0}; {-4, 1, -5, -1, -5, -4, 6, 4, -4, -4, 0, 0}; {6, -1, 5, -3, 5, 6, 5, 2, -4, -5, 0, 0}; {5, -2, 4, -4, 5, 6, 5, 2, -5, -5, 0, 0}; {-3, 2, -4, 0, -3, -4, 6, 4, -3, -3, 0, 0}; {-4, 1, -5, -1, -4, -5, 6, 4, -4, -4, 0, 0}; {-3, 3, -2, 3, 1, 1, 1, 0, 6, -5, 0, 0}; {-3, 2, -4, 0, -3, -3, 6, 4, -3, -4, 0, 0}; {-5, 0, 6, -2, -5, -5, 5, 3, -4, -4, 0, 0}; {4, -4, 1, 4, 0, -1, -3, 6, -2, -3, 0, 0}; {6, -1, 5, -3, -5, -5, 5, 3, -4, -5, 0, 0}; {-3, 2, -4, 0, -2, -3, -5, 4, -4, -4, 0, 0}; {1, 2, 4, 4, -1, 6, 0, -4, 3, 4, 0, 0}; {-5, 6, 6, 4, -2, 4, -2, 2, 6, -4, 0, 0}; {5, -1, 6, -1, -1, -1, -1, -1, -5, -5, 0, 0}; {5, -1, 6, -1, 1, -1, -1, 0, 6, 6, 0, 0}; {3, -4, 2, 6, -5, 4, 3, 3, -3, -4, 0, 0}; {5, -1, 6, -1, 1, -1, 0, 0, 5, 5, 0, 0}; {1, 6, 0, 4, 6, 4, 1, 6, 5, 0, 0, 0}; {3, -1, -4, 3, -4, -2, 5, -5, 6, -2, 0, 0}; {-4, 4, 1, -4, 1, -5, -1, 1, 2, 3, 0, 0}; {0, 5, -1, 3, 6, 4, 1, 6, 5, 0, 0, 0}; {3, -1, -4, 3, -3, -1, 6, -4, 6, -2, 0, 0}; {-3, 3, -2, 3, -4, -5, -4, -3, 6, 6, 0, 0}; {-5, 0, 6, -1, 3, 1, -2, 5, 3, -1, 0, 0}; {6, -2, 3, -5, -2, -5, 4, -4, 6, 0, 0, 0}; {5, -1, 6, 0, 5, 5, -5, -4, 5, 5, 0, 0}; {-5, 0, 6, -1, 6, -5, 6, 4, -5, -5, 0, 0}; {5, -2, 4, -3, 5, 6, 5, 2, -3, -4, 0, 0}; {4, -3, 3, -4, 4, 5, 5, 2, -5, -5, 0, 0}; {6, -1, 5, -2, 6, 6, 5, 3, -5, -5, 0, 0}; {5, -2, 4, -3, 6, 6, 5, 3, -5, -5, 0, 0}; {-5, 1, -4, 2, 0, 2, 0, 0, 5, 5, 0, 0}; {4, -1, -5, 2, 1, 4, -4, 3, 5, 0, 0, 0}; {2, -5, 1, 6, 3, 5, 4, 1, -5, 6, 0, 0}; {0, 5, -1, 4, 1, -3, 5, 4, -1, 0, 0, 0}; {0, -5, 3, -2, -3, -4, -3, 2, 6, -1, 0, 0}; {-2, 4, -1, 5, 3, 3, 1, 1, -5, -4, 0, 0}; {-3, 3, -2, 4, 2, 2, 1, 1, 5, 6, 0, 0}; {-5, 0, 6, -1, -4, -5, 6, 4, -5, -4, 0, 0}; {5, -2, 4, -3, -5, 6, 5, 3, -5, -5, 0, 0}; {3, -4, 2, -5, 5, 4, 4, 2, -5, -4, 0, 0}; {2, -5, 1, 6, 6, 4, 4, 3, -5, 6, 0, 0}; {5, 0, -4, 3, 5, 6, 6, -4, 1, 4, 0, 0}; {-2, 2, -5, -1, -1, -5, 5, -3, -5, 0, 0, 0}; {1, 6, 0, 5, 6, 3, 3, 2, -3, -4, 0, 0}; {3, -1, -4, 4, -4, 2, 1, 3, -3, 0, 0, 0}; {5, 0, -4, 3, 6, 0, 5, 5, 4, 5, 0, 0}; {1, -5, 2, -4, -1, -3, -3, -1, 6, 6, 0, 0}; {1, -5, 2, -4, -1, -2, -3, -1, 6, 6, 0, 0}; {-3, 1, 6, -2, -1, -4, 5, -3, -5, 1, 0, 0}; {0, 6, 1, -5, -2, -3, -3, -2, 6, 6, 0, 0}; {-3, 2, -4, 1, 3, 1, 1, 1, -4, -5, 0, 0}; {3, 0, -2, -5, 1, -5, 2, -4, -2, -1, 0, 0}; {5, 0, -4, 3, -5, 0, 4, 5, 5, 5, 0, 0}; {-3, 2, -4, 1, 4, 1, -1, 5, 3, -1, 0, 0}; {-4, 0, 5, -3, -1, -5, 4, -3, -5, 0, 0, 0}; {-1, 5, 0, 6, -2, -4, -4, -1, 6, 6, 0, 0}; {-1, 5, 0, 6, -2, -4, -4, -1, -5, -5, 0, 0}; {-2, 4, -1, 5, -3, -5, -4, -2, 6, 6, 0, 0}; {-4, 2, -3, 3, -5, -5, -4, -3, 6, 5, 0, 0}; {3, -2, 6, 1, 6, -2, 2, 5, 4, 4, 0, 0}; {6, -2, 3, -4, -2, -5, 3, -4, 6, 0, 0, 0}; {-4, 2, -3, 4, -4, -5, -5, -2, 4, 5, 0, 0}; {5, -1, 6, 1, 5, 5, 6, -4, 5, 5, 0, 0}; {6, 0, -5, 2, -5, 6, 6, -2, 2, 4, 0, 0}; {4, -4, 1, 6, -3, 6, 3, -4, 6, 0, 0, 0}; {3, -4, 2, -4, 0, -1, -1, 0, 4, 4, 0, 0}; {-1, 4, -2, 4, -4, -5, -2, -2, 4, 4, 0, 0}; {0, 5, -1, 5, -3, -3, -2, -2, -5, 6, 0, 0}; {-3, 3, -2, 5, -2, 1, 5, -5, 6, 5, 0, 0}; {5, -1, 6, 1, -5, 6, 6, -2, 1, 3, 0, 0}; {4, -2, 5, 0, 6, 5, 5, -3, 1, 3, 0, 0}; {-3, 2, -4, 2, -5, -5, -3, -3, 6, 5, 0, 0}; {-5, 1, -4, 3, -3, -2, 3, 4, 0, 1, 0, 0}; {2, -4, 3, -2, 5, 4, 4, -4, -1, 2, 0, 0}; {2, -4, 3, -2, 5, 5, 5, -3, 0, 3, 0, 0}; {0, 6, 1, -4, 3, 3, 4, -4, -1, 2, 0, 0}; {0, 6, 1, -4, 4, 3, 3, -4, -1, 2, 0, 0}; {4, -3, 3, -3, 5, 5, 5, 3, 6, -5, 0, 0}; {3, -4, 2, -4, 4, 5, 4, 2, -5, -5, 0, 0}; {3, -3, 4, -1, -4, -2, 0, 6, -4, 1, 0, 0}; {1, 6, 0, 6, 2, 4, 4, 0, -4, -5, 0, 0}; {0, 5, -1, 5, 1, 3, 3, 0, -4, -5, 0, 0}; {3, -4, 2, -4, 5, 5, 4, 3, -5, -5, 0, 0}; {-1, 4, -2, 4, 1, 3, 2, 0, -4, -4, 0, 0}; {-5, -1, 4, -3, 5, -5, 6, 2, -3, -4, 0, 0}; {-3, 2, -4, 2, 0, 1, 2, -1, -4, -5, 0, 0}; {-5, -1, 4, -3, 6, -5, 6, 2, -1, -4, 0, 0}; {0, -5, 3, -1, 0, 4, 5, 5, 0, 2, 0, 0}; {-1, 3, -4, 1, 0, 4, 2, 6, 5, 2, 0, 0}; {6, -3, 1, 5, 4, 0, -3, 0, -3, 2, 0, 0}; {-2, 4, -1, 6, -4, -5, -4, -2, 5, 6, 0, 0}; {-5, -1, 4, -3, -2, -5, 3, -4, 6, 0, 0, 0}; {-2, 4, -1, 6, -3, -4, -4, -2, 6, 6, 0, 0}; {-3, 3, -2, 5, -4, -5, -5, -2, 6, 6, 0, 0}; {-3, 3, -2, 5, -4, -5, -4, -2, 5, 5, 0, 0}; {4, -3, 3, -3, -1, -1, 0, -1, -5, 5, 0, 0}; {-4, 2, -3, 5, -4, -5, -4, -2, 5, 5, 0, 0}; {6, 0, -5, 3, 6, 6, -5, -3, 5, 4, 0, 0}; {5, -1, 6, 2, 5, 5, 6, -3, 5, 5, 0, 0}; {6, 1, -3, 6, -2, 0, 2, 4, 2, 3, 0, 0}; {4, -2, 5, 1, 4, 5, 6, -4, 5, 4, 0, 0}; {2, 6, -1, 5, -5, 3, 1, 6, 4, -1, 0, 0}; {2, 6, -1, 5, -5, 4, 2, -5, 5, -1, 0, 0}; {4, -2, 5, 1, 5, 4, 5, -4, 5, 5, 0, 0}; {6, 0, -5, 3, -5, 6, -4, -3, 5, 4, 0, 0}; {2, 5, -3, 2, 3, -1, -5, -1, -4, 1, 0, 0}; {4, -2, 5, 1, 5, 5, 6, -4, 5, 4, 0, 0}; {4, -2, 5, 1, 5, 5, -5, -4, 4, 3, 0, 0}; {3, -3, 4, 0, 4, 4, 6, -5, 5, 4, 0, 0}; {2, -4, 3, -1, 3, 4, 5, -5, 4, 4, 0, 0}; {1, -5, 2, -2, 2, 3, 5, -5, 4, 4, 0, 0}; {5, 0, -4, 5, -2, 2, 0, 1, -4, -1, 0, 0}; {-4, 2, -3, 5, -3, 0, 4, -5, 5, 3, 0, 0}; {-3, 4, 0, -3, 2, -5, 0, 3, 3, 3, 0, 0}; {-5, 1, -4, 4, -4, 0, 5, 6, 5, 5, 0, 0}; {-1, 2, 6, -1, 1, -3, 5, -2, -5, 1, 0, 0}; {0, 4, -3, 3, 6, 3, 0, 6, 4, -1, 0, 0}; {3, -3, 4, 0, 5, 5, 5, -3, 1, 3, 0, 0}; {2, -5, 1, -4, 0, -1, -2, 0, 5, 5, 0, 0}; {1, 6, 0, -5, -1, -2, -2, -1, 5, 5, 0, 0}; {1, 6, 0, -5, -1, -2, -2, -1, 4, 4, 0, 0}; {-1, 4, -2, 5, -3, -4, -3, -2, 5, 5, 0, 0}; {-2, 3, -3, 4, -4, -5, -3, -2, 4, 4, 0, 0}; {-2, 3, -3, 4, -4, -5, -3, -2, 6, 6, 0, 0}; {-4, 1, -5, 2, 6, 6, -4, -3, 5, 5, 0, 0}; {-5, 1, -4, 4, -3, 0, 3, -5, 5, 4, 0, 0}; {-1, 3, -4, 2, 6, 3, 0, 6, 4, 0, 0, 0}; {-1, 4, -2, 5, -2, -3, -3, -1, 3, 4, 0, 0}; {-5, 0, 6, 1, 6, 6, -4, -3, 3, 3, 0, 0}; {1, -5, 2, -2, 5, -5, 1, 2, -2, 0, 0, 0}; {5, -2, 4, -1, 5, 5, -5, -4, 5, 5, 0, 0}; {1, 5, -2, 4, -3, -4, -1, -2, 5, 3, 0, 0}; {2, 6, -1, 5, -1, -2, -1, -1, -4, -5, 0, 0}; {1, 5, -2, 4, -2, -3, -1, -1, 4, 3, 0, 0}; {1, 6, 0, -5, 2, 2, 6, 6, 1, 1, 0, 0}; {1, 5, -2, 4, -2, -2, -3, 4, 1, -2, 0, 0}; {-1, 4, -2, 5, 0, 3, 3, 0, 6, 6, 0, 0}; {3, -5, 0, 6, 0, -2, 0, 0, 4, 3, 0, 0}; {1, 5, -2, 4, -2, -4, -1, -2, 4, 3, 0, 0}; {-3, 1, 6, 0, -5, -5, -2, -3, 4, 1, 0, 0}; {-3, 0, 4, -3, 3, 2, 1, -5, 3, -1, 0, 0}; {-2, 2, -5, 1, -4, -3, -4, 3, 0, -3, 0, 0}; {-3, 2, -4, 3, -1, 2, 3, -1, -3, -4, 0, 0}; {0, 5, -1, 6, 3, 4, 3, 3, 6, 6, 0, 0}; {-5, 0, 6, 1, -2, 0, 1, -2, -4, -5, 0, 0}; {-5, 0, 6, 1, -2, 0, 3, 2, 3, 5, 0, 0}; {-5, -1, 4, -2, 6, -5, 6, 3, -1, -3, 0, 0}; {6, -2, 3, -3, 5, -5, 6, 2, -2, -4, 0, 0}; {-2, 1, 5, -2, 6, -3, -3, -2, 6, 3, 0, 0}; {-2, 1, 5, -2, -5, -2, -4, -2, -4, 4, 0, 0}; {-3, 0, 4, -3, 6, -3, -4, -3, -5, 4, 0, 0}; {-1, 5, 0, -4, -4, 2, 6, -3, -1, 1, 0, 0}; {-3, 0, 4, -3, 6, -2, -4, -2, -4, 4, 0, 0}; {-4, -1, 3, -4, 5, -3, -5, -3, -5, 4, 0, 0}; {-2, 3, -3, 4, 4, -3, -3, 1, 2, 2, 0, 0}; {-4, -1, 3, -4, 6, -3, -5, -3, -5, 3, 0, 0}; {-1, 5, 0, -4, -3, 3, 5, -3, 0, -1, 0, 0}; {-5, -2, -2, -5, 5, -4, -5, -3, 6, 3, 0, 0}; {0, 6, 1, -3, -2, 4, -4, -4, 6, -4, 0, 0}; {6, -3, 1, 6, 4, -4, 6, -3, 6, 3, 0, 0}; {0, 6, 1, -3, -2, 5, -4, -4, 6, -4, 0, 0}; {-2, 4, -1, -5, -3, 3, -5, -5, 6, -5, 0, 0}; {3, 6, -2, 4, 3, -5, 5, -5, 6, 2, 0, 0}; {4, -4, 1, -4, -4, 1, 0, 4, 3, 0, 0, 0}; {2, 5, -3, 3, 2, 6, 5, -5, 6, 3, 0, 0}; {3, 1, 0, 1, -5, 0, 5, 2, -4, -4, 0, 0}; {4, -3, 3, -1, 1, 2, -1, 0, 6, 5, 0, 0}; {-2, 1, 5, -1, 0, -4, 4, -3, 6, 0, 0, 0}; {-4, -2, 1, 6, 6, 2, -3, 1, -3, 2, 0, 0}; {-3, 0, 4, -2, -1, -4, 4, -3, 6, 0, 0, 0}; {5, 0, -4, 6, -1, 0, 2, 5, 1, 2, 0, 0}; {1, -5, 2, -1, 3, 3, 5, -5, 4, 4, 0, 0}; {2, -3, 5, 3, -4, -3, 0, 3, 2, 2, 0, 0}; {-1, 4, -2, 6, -3, -4, -2, -2, 6, 5, 0, 0}; {-2, 3, -3, 5, -4, -4, -4, -2, 6, 5, 0, 0}; {-1, 5, 0, -3, 1, 2, 4, 6, 3, 4, 0, 0}; {-4, -1, 3, -3, -1, -5, 3, -4, 5, 0, 0, 0}; {0, 6, 1, -2, 3, 3, 5, -5, 4, 4, 0, 0}; {-2, 3, -3, 5, -3, -4, -3, -2, 6, 5, 0, 0}; {5, -3, 2, -3, 0, -1, 0, 0, 6, 5, 0, 0}; {2, -4, 3, 0, 6, -2, -1, -2, 2, 3, 0, 0}; {-2, 4, -1, -4, 2, 2, 3, -5, 0, 2, 0, 0}; {6, -2, 3, -2, 4, -5, -5, 2, 0, -2, 0, 0}; {-5, -1, 4, -1, 6, -5, -5, 2, 0, -3, 0, 0}; {-5, -1, 4, -1, 6, -5, -5, 2, 0, -2, 0, 0}; {5, -4, 0, 6, 0, 0, 0, 5, 3, 0, 0, 0}; {6, -2, 3, -2, 5, -5, 6, 2, -1, -3, 0, 0}; {-4, 2, -3, 6, 3, -5, -3, -3, 1, 3, 0, 0}; {4, -4, 1, -4, 3, 6, 6, 1, -1, -3, 0, 0}; {4, -4, 1, -4, 4, 5, 6, 1, -1, -3, 0, 0}; {3, -5, 0, -5, 3, 5, 5, 0, -2, -4, 0, 0}; {-3, -1, 2, -5, 1, 4, 1, -5, 4, 1, 0, 0}; {-1, 4, -2, 6, 4, -3, -1, 0, 2, 3, 0, 0}; {-4, 0, 5, 0, -2, 3, 2, 4, 4, 4, 0, 0}; {6, -3, 1, -5, 4, -4, 6, -4, -5, 4, 0, 0}; {-5, -1, 4, -1, -3, 2, 1, 4, 4, 3, 0, 0}; {5, -5, -2, 3, -1, 2, 0, 0, -3, 5, 0, 0}; {4, 6, -3, 2, -2, 1, -1, 0, -3, 5, 0, 0}; {5, -4, 0, 6, 3, -5, 6, -3, 6, 3, 0, 0}; {6, 0, -5, 4, 4, -1, 3, -4, -3, 0, 0, 0}; {4, -5, -1, 5, 3, -5, 5, -4, 6, 3, 0, 0}; {-2, 3, -3, 5, 5, -1, 2, -1, -3, -1, 0, 0}; {-2, 4, -1, -4, -3, 4, -4, -5, 6, -3, 0, 0}; {5, -2, 4, 0, 0, -5, -1, -2, -5, -3, 0, 0}; {6, -1, 5, 1, 1, -4, -1, -2, -5, -2, 0, 0}; {5, -1, 6, 4, -4, 2, 3, -2, -4, -3, 0, 0}; {-1, 4, -2, -5, -2, 5, 5, -1, -3, -3, 0, 0}; {-1, 4, -2, -5, -2, 5, 5, 0, -2, -3, 0, 0}; {-3, 4, 0, -1, 5, -1, 3, 3, 5, 0, 0, 0}; {-2, 3, -3, 6, -2, 5, 5, 0, -2, -3, 0, 0}; {4, -4, 1, -3, 0, -5, 6, 1, -1, -3, 0, 0}; {6, -3, 1, -4, -2, 5, 1, 6, 3, -1, 0, 0}; {6, -3, 1, -4, -2, 5, 1, -5, 3, 0, 0, 0}; {-3, 3, -2, -4, 1, 1, 3, 6, 3, 3, 0, 0}; {-3, 3, -2, -4, 1, 1, 3, 6, 3, 4, 0, 0}; {-4, 2, -3, -5, 0, 0, 2, 5, 3, 3, 0, 0}; {-5, 2, -2, -3, 4, -2, 2, 2, 4, 0, 0, 0}; {3, 6, -2, 5, -4, 2, -1, 5, 2, -1, 0, 0}; {-3, 3, -2, -4, 3, -5, -3, -4, 1, 2, 0, 0}; {2, 6, -1, -5, 3, 4, 5, 0, -1, -3, 0, 0}; {5, -4, 0, -5, 4, -4, 5, -5, -5, 4, 0, 0}; {3, 5, -4, 2, -2, 1, -1, -1, -3, 5, 0, 0}; {1, 3, 6, 0, -4, 0, -3, -2, -4, 5, 0, 0}; {4, 6, -3, 4, 3, -1, 6, -1, 6, 0, 0, 0}; {-4, 3, -1, -1, 4, -1, 3, 3, 5, 0, 0, 0}; {2, 4, -5, 2, 2, -3, 4, -3, 5, 0, 0, 0}; {-1, 6, 2, 2, -5, -5, -1, 3, 1, 2, 0, 0}; {-1, 6, 2, 2, -5, -4, -1, 3, 0, 2, 0, 0}; {-3, 3, -2, -3, 1, 1, 4, -5, 3, 2, 0, 0}; {6, 0, -5, 6, -1, 4, -5, 6, -5, 2, 0, 0}; {-5, 2, -2, -2, 4, -2, 2, 3, 5, 0, 0, 0}; {3, -3, 4, 3, -4, 3, 6, 6, 6, 2, 0, 0}; {-1, 6, 2, 2, -4, -5, 0, 4, 0, 0, 0, 0}; {2, -3, 5, 5, 0, -5, -1, 0, 3, -2, 0, 0}; {1,-5,2, 1, -5, 1, 5, 5, 6, 0, 0, 0}; {-1, 4, -2, -4, 1, -4, -4, 6, -4, 0, 0, 0}; {5, -3, 2, -1, 6, 4, -4, 0, 1, 0, 0, 0}; {4, -1, -5, -4, 1, -4, 0, 3, 3, -2, 0, 0}; {3, -2, 6, -5, 0, -5, 0, 2, 3, -2, 0, 0}; {6, 1, -3, -2, 3, 4, -3, 2, 0, 1, 0, 0}; {4, -1, -5, -4, 2, -4, 0, 2, 3, -1, 0, 0}; {0, 6, 1, 1, 6, 0, 4, 4, 5, 0, 0, 0}; {-1, 5, 0, 0, 5, 0, 3, 4, 5, -1, 0, 0}; {-4, 3, -1, 0, 6, 5, -1, 3, 0, 0, 0, 0}; {0, 6, 1, 1, -5, 1, 4, 5, 5, 0, 0, 0}; {-3, 2, -4, -5, 0, 5, -4, -5, -5, 1, 0, 0}; {-1, 5, 0, 0, 6, 1, 3, 4, 6, 0, 0, 0}; {-4, 1, -5, 6, -1, 5, -5, -5, -5, 1, 0, 0}; {5, -1, 6, 6, 1, -4, 5, 6, 5, -1, 0, 0}; {3, -4, 2, 1, -4, 1, -3, -3, -5, 0, 0, 0}; {1, 6, 0, -1, 6, -1, -3, -4, -5, 0, 0, 0}; {2, -4, 3, 3, -1, 6, 4, 5, 4, -2, 0, 0}; {1, 5, -2, -4, 3, -5, 1, 0, -1,

2, 0, 0}; {0, 5, -1, -2, 6, -1, -3, -5, -5, 0, 0, 0}; {-1, 4, -2, -3, 5, -1, -5, -5, -5, 0, 0, 0}; {6, -5, -3, 5, 0, 4, 1, -2, -2, 5, 0, 0}; f-3, -5, 6, -1, 5, -4, 1, -5, 5, -2, 0, 0}; {2, -3, 5, -5, -1, 1, -5, 2, 0, 1, 0, 0}; {4, -1, -5, -3, 1, 5, 1, 0, 0, -3, 0, 0}; {6, 2, -1, 2, -4, 0, -4, -3, -3, -4, 0, 0}; {-4, 2, -3, -2, 3, -2, 2, 3, 4, -1, 0, 0}; {5, -1, 6, -5, 1, -5, 6, -5, 5, 0, 0, 0}; {2, -5, 1, 1, 6, 1, -2, -3, -5, 0, 0, 0}; {-5, 1, -4, -3, 3, -1, 1, 3, 4, -1, 0, 0}; {-3, 1, 6, 5, -2, 5, 0, -3, -3, 2, 0, 0}; {2, -5, 1, 1, -5, 0, -2, -4, -5, 0, 0, 0}; {2, -4, 3, 4, -1, 6, 4, 5, 4, -1, 0, 0}; {0, 5, -1, -1, 5, -1, -3, -4, 6, 0, 0, 0}; {1, -5, 2, 3, -2, 6, 2, 4, 4, -1, 0, 0}; {0, 5, -1, -1, 5, 0, -4, -4, 6, 0, 0, 0}; {-1, 4, -2, -2, 4, -1, -4, -5, -5, 0, 0, 0}; {-2, 3, -3, -3, 3, -2, -5, -5, 6, -1, 0, 0}; {-3, 1, 6, 5, -1, 5, 0, -1, -3, 1, 0, 0}; {0, 5, -1, -1, 6, -1, -4, -4, -5, 0, 0, 0}; {-2, 2, -5, 6, 0, 4, 1, -1, -3, 1, 0, 0}; {0, 5, -1, -1, 6, 0, -4, -5, -5, 0, 0, 0}; {-1, 4, -2, -2, 5, -1, -4, -5, -5, 0, 0, 0}; {-3, 1, 6, 5, -1, 4, 0, -1, -4, 1, 0, 0}; {-3, 2, -4, -4, 3, -3, -5, -5, 6, -1, 0, 0}; {-4, 0, 5, 4, -1, 4, -1, -1, -3, 1, 0, 0}; {-3, 2, -4, -4, 4, -2, 6, -5, -5, 0, 0, 0}; {-4, 0, 5, 4, -1, 4, 0, -2, -3, 1, 0, 0}; {-5, -1, 4, 3, -2, 3, -1, -2, -4, 1, 0, 0}; {-5, 0, 6, 6, 2, -4, 6, 6, 5, -2, 0, 0}; {4, -4, 1, 1, -4, 1, -2, -3, -5, 0, 0, 0}; {6, 3, 1, 6, -1, 2, -2, 6, -3, -1, 0, 0}; {4, 2, 1, -5, 2, 6, -1, 5, 4, -3, 0, 0}; {3, 1, 0, 6, 1, 5, -1,4,4, -3, 0, 0}; {0, -5, 3, 6, -2, -1, 5, 1, 0, 1, 0, 0}; {4, 1, -1, 4, -2, 1, -3, 5, -4, -2, 0, 0}; {2, -2, -5, -1, 4, 6, 1, -3, -2, 0, 0, 0}; {2, -2, -5, -1, 4, 6, 1, -3, -1, 0, 0, 0}; {0, -4, 5, -3, 2, 5, 0, -3, -3, -1, 0, 0}; {-2, 5, 1, 4, -4, -2, 5, 1, 0, 0, 0, 0}; {3, 0, -2, 3, -3, -1, 4, -4, -5, -1, 0, 0}; {-4, 1, -5, -4, 1, -3, 6, -5, 6, -1, 0, 0}; {-2, 2, -5, -5, -1, 5, 1, 0, -3, 2, 0, 0}; {-3, 2, -4, -3, 3, -2, 6, -5, 6, 0, 0, 0}; {-3, 2, -4, -3, 3, -2, -5, 6, 5, -1, 0, 0}; {-4, 0, 5, 5, -2, 4, 0, -2, -3, 1, 0, 0}; {-4, 0, 5, 5, -2, 4, 0, -1, -4, 1, 0, 0}; {-3, 2, -4, -3, 3, -2, -5, -5, 6, -1, 0, 0}; {5, -4, 0, -1, 3, -3, 4, 2, -1, 2, 0, 0}; {-3, 2, -4, -3, 3, -3, -5, -4, 6, 0, 0, 0}; {-5, -1, 4, 4, -2, 3, -1, -3, -4, 0, 0, 0}; {-5, -1, 4, 4, -2, 3, -1, -2, -4, 0, 0, 0}; {6, -2, 3, 3, -3, 2, -2, -3, -4, 0, 0, 0}; {-5, -1, 4, 4, -2, 3, 0, -2, -4, 1, 0, 0}; {6, -2, 3, 3, -3, 3, -2, -2, -4, 1, 0, 0}; {4, -5, -1, -2, 3, -4, 3, 1, -1, 2, 0, 0}; {5, -3, 2, 2, -4, 2, -2, -2, -4, 0, 0, 0}; {6, -1, 5, 6, 1, -4, 5, 6, 6, -1, 0, 0}; {4, -4, 1, 1, -5, 1, -2, -3, -4, 0, 0, 0}; {4, -5, -1, -2, 3, -3, 3, 2, -1, 2, 0, 0}; {-4, 0, 5, 5, -1, 3, 0, -1, -4, 1, 0, 0}; {1, -2, -4, 2, -5, -2, 4, -5, 6, -2, 0, 0}; {0, -3, -5, 1, 6, -3, 3, -5, 6, -2, 0, 0}; {1, -1, -2, 5, -1, 4, -1, 2, 3, -5, 0, 0}; {-1,-5, 4, -3, 2, 4, 0, -4, -2, 0, 0, 0}; {-2, 5, 1, 5, -3, -2, 5, 1, 0, 0, 0, 0}; {-2, 6, 3, -4, 1, 3, -1, -4, -3, -1, 0, 0}; {-2, 6, 3, -4, 1, 3, -1, -4, -2, 0, 0, 0}; {-2, 6, 3, -4, 1, 3, 0, -4, -2, 0, 0, 0}; {0, -3, -5, 1, -5, -2, 4, -5, -5, -1, 0, 0}; {-3, 3, -2, 1, 4, 5, -2, 5, 3, 2, 0, 0}; {-2, -5, 5, -1, 5, -3, 5, 4, -5, -2, 0, 0}; {5, 1, -2, 3, -4, 0, -4, -5, -5, -3, 0, 0}; {6, 1, -3, 1, 6, -5, 3, -1, -1,0,0, 0}; {-5, 3, 0, 5, -1, 1, -2, -5, -3, -1, 0, 0}; {-2, -4, -5, 2, -2, 3, -1, 2, 5, -3, 0, 0}; {-4, 5, 3, -3, 4, -4, 4, 6, 6, -4, 0, 0}; {6, 2, -1, 4, -2, 1, -4, -3, -4, -3, 0, 0}; {4, -1, -5, -1, 5, 5, 0, 1, -2, -1, 0, 0}; {-4, 5, 3, -3, 5, -4, 4, 6, 5, -4, 0, 0}; {5, -3, 2, 3, -5, -5, 6, 2, -2, 2, 0, 0}; {5, -2, 4, 6, -1, 0, 1, -1, 6, 1, 0, 0}; {4, -4, 1, 2, -5, 1, -3, -3, -5, 0, 0, 0}; {2, 5, -3, -3, 1, -5, 2, 1, -2, 2, 0, 0}; {2, -2, -5, 0, -3, -1, -4, -2, 5, -5, 0, 0}; {3, -3, 4, -4, 4, 5, 3, 2, -5, -5, 0, 0}; {3, -3, 4, -4, 5, 5, 4, 2, -5, -5, 0, 0}; {1, -3, 6, 0, -1, 3, -5, 2, 5, 0, 0, 0}; {0, -4, 5, -1, -2, 2, -5, 1, 4, 0, 0, 0}; {2, -4, 3, -5, 5, 5, 2, 2, -4, -4, 0, 0}; {0, 5, -1, 2, -1, -2, -5,

5, -3, -4, 0, 0}; {-1,4,-2, 1, -2, -2, -5, 5, -3, -4, 0, 0}; {1, -4, 4, -3, -3, -2, -4, -2, 5, 6, 0, 0}; {-2, -5, 5, 0, 4, -2, 4, 3, 5, -3, 0, 0}; {5, 1, -2, 4, -5, 1, 6, 6, 5, -3, 0, 0}; {6, -1, 5, -4, -4, 1, -3, 5, 4, 0, 0, 0}; {-5, 0, 6, -3, -3, 6, 5, 4, -3, -5, 0, 0}; {-2, -5, 5, 0, 5, -4, 2, 6, 5, -2, 0, 0}; {-2, -5, 5, 0, 5, -4, 3, 6, 5, -3, 0, 0}; {-1, -4, 6, 1, 6, -1, 5, 4, -4, -1, 0, 0}; {-2, 5, 1, 6, -3, 3, -4, -5, 6, -5, 0, 0}; {5, -3, 2, 4, 4, -5, 4, -3, 6, 3, 0, 0}; {-3, 4, 0, 5, -4, 3, 6, 6, 5, 6, 0, 0}; {-5, 2, -2, 3, -5, -4, 4, 0, 0, -1, 0, 0}; {-4, 5, 3, -2, 4, -4, 4, 3, 6, -2, 0, 0}; {6, 2, -1, 5, -2, 1, -4, -4, -5, -2, 0, 0}; {4, -1, -5, 0, 4, 6, 0, -1, -3, 0, 0, 0}; {4, -2, 5, -3, 0, 1, -4, 3, 2, 1, 0, 0}; {3, -1, -4, 2, -5, -1, 6, 6, 6, -4, 0, 0}; {-5, 4, 2, -3, 4, -5, 3, 5, 5, -3, 0, 0}; {3, -2, 6, -1, 5, 5, 0, -1, 0, 2, 0, 0}; {4, 0, -3, 3, -2, -1, -3, 6, -4, -1, 0, 0}; {3, -4, 3, 6, 1, -2, -1, 0, -4, -4, 0, 0}; {-2, 3, -2, 1, -3, -3, 6, 4, -2, -3, 0, 0}; {-4, 1, -4, -1, -5, -5, 6, 3, -3, -4, 0, 0}; {-4, 3, 0, 5, 3, 6, -2, 4, 6, 1, 0, 0}; {4, 0, -2, 4, 4, -4, 1, 6, 0, 0, 0, 0}; {4, -5, 0, 1, -4, 0, -5, 2, -2, -1, 0, 0}; {-5, 2, -1, 4, 4, -1, 5, -4, 2, 1, 0, 0}; {-2, -2, 0, -2, 5, 0, 4, -1, 4, 6, 0, 0}; {-4, 2, -2, 2, 3, 5, -2, 4, 4, 1, 0, 0}; {5, -2, 5, -4, -4, -2, 3, -5, 6, 3, 0, 0}; {6, 3, 2, -3, 3, 6, 1, 5, 4, -3, 0, 0}; {4, -1, -4, 1, 5, 6, 1, -1, -2, -1, 0, 0}; {5, 2, 1, -4, 2, 6, 1, 4, 5, -3, 0, 0}; {5, 1, -1, 5, -2, 1, -4, 6, -3, 0, 0, 0}; {5, 2, 1, -4, 2, 6, 2, 3, 5, -3, 0, 0}; {3, -3, 5, -3, 0, 1, -5, 3, 2, 1, 0, 0}; {2, -4, 4, -4, -1, 0, -5, 2, 2, 0, 0, 0}; {6, 4, 4, 0, -5, 1, -3, -1, 2, -5, 0, 0}; {3, 0, -1, 6, 0, 5, 1, 2, 4, -4, 0, 0}; {0, 6, 2, 6, -3, -1, 6, 2, 1, 0, 0, 0}; {2, -3, 6, -1, 4, 5, -1, 0, -2, 1, 0, 0}; {3, -1, -3, 3, -3, -1, -5, -5, -5, -2, 0, 0}; 11, -5, 3, -5, -1, -1, 5, 3, 1, 2, 0, 0}; {1, -4, 5, -2, 3, 4, -1, 0, -3, 0, 0, 0}; {2, -3, 6, -1, 4, 5, 1, -2, -2, -1, 0, 0}; {1, -4, 5, -2, 3, 4, 0, -3, -2, 0, 0, 0}; {1, -4, 5, -2, 3, 4, 0, -3, -1, 1, 0, 0}; {-1, 5, 1, 5, -3, -3, 4, 1, 0, 1, 0, 0}; {-3, 2, -3, 0, 3, 2, -4, 5, 2, 2, 0, 0}; {3, -1, -3, 3, -3, 0, -4, 5, -4, -1, 0, 0}; {2, -2, -4, 2, -4, -1, -5, 6, -4, -1, 0, 0}; {2, -2, -4, 2, -4, -1, -5, -5, -5, -3, 0, 0}; {-1, 5, 1, 5, -3, -2, 5, 1, 1, 0, 0, 0}; {0, -5, 4, -3, 2, 4, 0, -3, -2, -1, 0, 0}; {-1, 6, 3, -4, 1, 3, -1, -3, -3, -1, 0, 0}; {-1, -5, 5, -1, 5, -3, 5, 6, 6, -4, 0, 0}; {-1, 5, 1, 5, -2, -3, 4, 2, 1, 3, 0, 0}; {-3, 3, -1, 3, -4, -4, 4, 0, 0, 1, 0, 0}; {-4, 3, 0, 6, 0, 1, -2, -5, -3, 0, 0, 0}; {5, -2, 5, -3, 2, 0, -2, 3, 2, -2, 0, 0}; {-4, 3, 0, 6, 3, 6, -3, 4, 6, 1, 0, 0}; {6, 2, 0, -5, 6, -2, 3, -1, 2, -1, 0, 0}; {3, -4, 3, -5, 3, 5, 4, 2, -5, -5, 0, 0}; {4, -3, 4, -4, 5, 6, 3, 2, -4, -4, 0, 0}; {2, -3, 6, 0, -1, 3, -4, 2, 4, 1, 0, 0}; {3, -1, -3, 4, 5, -3, 2, -2, 1, -2, 0, 0}; {6, 1, -2, 4, 6, -2, -5, -2, 2, 2, 0, 0}; {5, 0, -3, 3, 5, -2, 3, 6, 2, 0, 0, 0}; {-1, 2, -5, -3, -5, -2, -5, -1, -4, 4, 0, 0}; {-2, 1, 6, -4, -5, -2, 5, -2, -4, 3, 0, 0}; {-1, 3, -3, 0, 0, 4, 0, -5, 5, 2, 0, 0}; {-1, 3, -3, 0, 0, 4, 2, -5, 5, 2, 0, 0}; {-1, 3, -3, 0, 0, 4, 2, -5, 5, 3, 0, 0}; {-3, 2, -3, 1, 3, 0, -1, 5, 4, -2, 0, 0}; {2, -2, -4, 3, -4, -2, 5, -5, 6, -2, 0, 0}; {0, -4, 6, 1, 6, -3, 3, 6, 5, -2, 0, 0}; {0, -4, 6, 1, 6, -3, 4, 6, 5, -3, 0, 0}; {1, -2, -3, 5, -1, 4, 0, 1, 3, -4, 0, 0}; {-2, 6, 4, -1, 4, -4, 4, 5, 5, -4, 0, 0}; {-5, 2, -1, 5, -3, 1, -4, -4, -5, -3, 0, 0}; {1, -3, -5, 2, -5, 2, 0, 2, -4, 0, 0, 0}; {-2, 3, -2, 2, 4, -3, -4, 2, 2, 2, 0, 0}; {-4, 0, 6, -3, -2, 2, 0, 6, 4, 2, 0, 0}; {0,-4,6, 1, -5, -3, 5, 6, 6, -2, 0, 0}; {-2, 6, 4, -1, 5, -4, 5, 4, 6, -2, 0, 0}; {5, -2, 5, -2, 1, -2, -1, 0, -5, -5, 0, 0}; {5, 0, -3, 4, -3, -1, -5, -5, 6, -2, 0, 0}; {-1, 6, 3, -2, 3, -4, 1, 3, 3, 4, 0, 0}; {3, -5, 1, 5, -4, 5, 3, 6, 5, -1, 0, 0}; {1, 5, -1, 3, -5, 4, 1, 6, 4, -1, 0, 0}; {1, 5, -1, 3, -5, 4, 1, 6, 4, 0, 0, 0}; {-1, 3, -3, 1, 5, 3, 0, -5, 4, -1, 0, 0}; {-5, 1, -3, 3, -3, 0, 3, -5, 6, 5, 0, 0}; {-5, 1, -3, 3, -3, 0, 4, -5, 6, 5, 0, 0}; {5, 0, -3, 4, 0, 3, -5, 3, 4, 0, 0, 0}; {3, -4, 3, -4, 4, 5, 4, 2, -5, -5, 0, 0}; {1, 6, 1, 6, 2, 4, 3, 1, -5, -5, 0, 0}; {0, 5, 0, 5, 1, 3, 3, 0, -5, -5, 0, 0}; {-3, 1, -5, -1, -5, -4, 6, 3, -3, -4, 0, 0}; {-4, 0, 6, -2, 6, -5, 6, 2, -3, -4, 0, 0}; {-4, 0, 6, -2, 6, -5, 6, 2, -2, -4, 0, 0}; {-3, 5, 3, -1, 0, 5, 0, 6, -1, -1, 0, 0}; {-5, -1, 5, -3, 6, -5, 6, 2, -4, -5, 0, 0}; {-3, 4, 1, -4, -4, 1, 4, -1, 2, -1, 0, 0}; {-5, 2, -1, 6, 6, -1, 4, -2, 1, 0, 0, 0}; {2, -5, 2, -5, 6, 5, 4, 2, 6, -5, 0, 0}; {4, -1, -4, 3, 4, -4, 4, -4, 1, 1, 0, 0}; {-1, 3, -3, 1, 0, 4, 2, -5, 5, 3, 0, 0}; {-1, 3, -3, 1, 0, 4, 3, -4, 5, 3, 0, 0}; {1, -4, 5, 0, 3, -5, 5, -4, 1, 2, 0, 0}; {5, -4, 1, 4, 3, -5, 4, -3, 6, 3, 0, 0}; {-5, 2, -1, 6, -2, 0, -5, -4, 6, -2, 0, 0}; {-4, 4, 2, -2, 3, -5, 3, 4, 4, -4, 0, 0}; {0, -5, 4, -1, 3, -3, 2, 3, 3, 4, 0, 0}; {4, -3, 4, -2, 0, -2, -2, 0, -5, -5, 0, 0}; {2, 6, 0, 5, -5, 4, 2, 6, 5, -1, 0, 0}; {3, -4, 3, -3, 0, -2, -2, 0, -5, 6, 0, 0}; {1, 4, -3, 1, 2, -2, 6, -2, -5, 0, 0, 0}; {2, 6, 0, 5, -5, 4, 1, 6, 4, -1, 0, 0}; {1, -5, 3, -2, 2, 3, 5, 6, 4, 4, 0, 0}; {-5, 1, -3, 4, -4, 0, 4, 6, 5, 4, 0, 0}; {-3, 4, 1, -3, 2, -5, 0, 3, 3, 4, 0, 0}; {-1, 2, -5, -1, 1, -3, 5, -3, 6, 1, 0, 0}; {0, 4, -2, 3, 6, 3, 0, 6, 4, -1, 0, 0}; {0, 4, -2, 3, 6, 3, 1, 6, 4, -1, 0, 0}; {1, -5, 3, -2, 3, 3, 5, -5, 4, 4, 0, 0}; {-3, 2, -3, 3, -5, 6, -4, -3, 5, 5, 0, 0}; {3, -3, 5, 0, 6, -2, 2, 5, 5, 4, 0, 0}; {-2, 2, -4, 1, 5, 2, -1, 5, 3, -1, 0, 0}; {-3, 1, -5, 0, 4, 2, -1, 5, 3, -1, 0, 0}; {-4, 1, -4, 2, -5, 6, -4, -3, 5, 5, 0, 0}; {6, -1, 6, 0, 5, 5, -4, -4, 4, 3, 0, 0}; {5, -2, 5, -1, 4, 4, -5, -4, 4, 4, 0, 0}; {2, -5, 2, -4, 2, 3, 6, -5, 3, 3, 0, 0}; {2, -4, 4, -1, 6, -2, 1, 6, 5, 4, 0, 0}; {-5, -2, 3, -5, -1, -5, 4, -4, 6, 0, 0, 0}; {-4, 0, 6, -1, 4, 2, -1, 6, 4, -1, 0, 0}; {5, -2, 5, -1, 5, 5, -5, -4, 5, 5, 0, 0}; {5, -2, 5, -1, 5, 5, -4, -4, 4, 3, 0, 0}; {4, -3, 4, -2, 4, 4, -5, -5, 4, 4, 0, 0}; {4, -3, 4, -2, 4, 4, -5, -4, 3, 3, 0, 0}; {4, -3, 4, -2, 4, 4, -5, -4, 4, 4, 0, 0}; {3, -4, 3, -3, 3, 3, 6, -5, 4, 4, 0, 0}; {3, -4, 3, -3, 4, 4, -5, -5, 4, 4, 0, 0}; {-3, 3, -1, 6, 2, 1, 2, -5, -2, 1, 0, 0}; {4, -3, 4, -2, 5, 4, -5, -4, 4, 4, 0, 0}; {1, 5, -1, 4, -1, -2, -1, -1, -5, 6, 0, 0}; {0, 4, -2, 3, -1, -3, 0, -1, 5, 4, 0, 0}; {-3, 2, -3, 3, 0, 2, 2, 0, 5, 6, 0, 0}; {5, -3, 3, -4, 4, 6, 5, 2, -4, -4, 0, 0}; {5, -3, 3, -4, 5, 5, 5, 2, -4, -4, 0, 0}; {-3, 1, -5, 0, -2, 3, 2, 6, 5, 3, 0, 0}; {-3, 1, -5, 0, -2, 3, 3, -5, 5, 2, 0, 0}; {-2, 3, -2, 4, 4, -3, -2, 3, 2, 1, 0, 0}; {-4, 0, 6, -1, -2, 2, 2, 6, 4, 3, 0, 0}; {-3, 4, 1, -3, 0, 4, 4, 5, -1, 2, 0, 0}; {6, -2, 4, -3, -3, 1, 0, 5, 4, 2, 0, 0}; {1, 5, -1, 5, 5, -2, -2, 3, 2, 2, 0, 0}; {-1, 2, -5, 0, 0, -4, 5, -3, 6, 0, 0, 0}; {2, -5, 2, -3, 0, -2, -1, -1, -5, 6, 0, 0}; {1, 6, 1, -4, -1, -3, -2, -1, -5, 6, 0, 0}; {-4, -2, 2, 6, 6, 2, -3, 1, -3, 2, 0, 0}; {-5, -3, 1, 5, 5, 1, -3, 0, -3, 2, 0, 0}; {4, -2, 6, 2, -5, -1, 3, 5, 5, 4, 0, 0}; {5, 0, -3, 6, 0, 5, -2, 1, 2, 2, 0, 0}; {3, -3,5, 1, 6, -2, 2, 5, 4, 3, 0, 0}; {3, -3, 5, 1, 6, -2, 2, 5, 4, 4, 0, 0}; {-5, -3, 1, 5, 6, 2, -3, 0, -3, 2, 0, 0}; {-4, 1, -4, 3, -5, -5, -4, -3, 6, 5, 0, 0}; {1, -5, 3, -1, 5, -3, 1, 5, 4, 4, 0, 0}; {6, -3, 2, -5, -2, -5, 3, -4, 6, 1, 0, 0}; {5, -4, 1, 6, -3, 6, 2, -4, 5, 0, 0, 0}; {6, -3, 2, -5, -2, -5, 4, -4, 6, 0, 0, 0}; {5, -4, 1, 6, -3, 6, 3, -4, 6, 0, 0, 0}; {3,-5, 1, -5, -1, -2, 0, -1, 5, 4, 0, 0}; {-1, 3, -3, 3, -4, -4, -2, -2, -5, 6, 0, 0}; {0, 5, 0, -5, 1, 2, 5, 6, 4, 4, 0, 0}; {4, -5, 0, 5, -3, 5, 2, -5, 5, 0, 0, 0}; {-2, 2, -4, 2, -4, -5, -2, -3, 6, 5, 0, 0}; {-1, 3, -3, 3, -3, -4, -1, -2, 5, 3, 0, 0}; {-1,3,-3, 3, -3, -4, -1, -2, 5, 4, 0, 0}; {-1, 3, -3, 3, -3, -4, -2, -2, -5, -5, 0, 0}; {-1, 3, -3, 3, -3, -4, -2, -1, 3, 3, 0, 0}; {-2, 2, -4, 2, -4, -4, -3, -2, -5, 6, 0, 0}; {-2, 3, -2, 5, 1, 1, 5, 6, 1, 2, 0, 0}; {5, -4, 1, 6, 0, -1, 1, -1, 6, 2, 0, 0}; {6, -2, 4, -2, 5, 5, -3, -4, 3, 1, 0, 0}; {-5, -2, 3, -4, 2, 1, 0, 6, 3, -1, 0, 0}; {4, -4, 2, -4, 3, 6, 5, 1, -3, -4, 0, 0}; {-2, 3, -2, 5, 2, 3, 1, 1, -4, -3, 0, 0}; {1, 3, -5, -1, 5, 4, 4, 0, -4, 1, 0, 0}; {2, 5, -2, 3, -2, -2, 0, -3, 6, 0, 0, 0}; {1, 4, -3, 2, -3, -2, -3, 4, -1, -3, 0, 0}; {2, 6, 0, 6, 2, 5, 4, 1, -4, -4, 0, 0}; {-2, 3, -2, 5, 3, -4, -2, 1, 2, 2, 0, 0}; {-4, 0, 6, 0, -2, 2, 5, 4, 3, 0, 0, 0}; {-2, 4, 0, -4, -4, 2, 4, -3, 0, -1, 0, 0}; {6, -3, 2, -5, 4, -5, 6, -3, -5, 4, 0, 0}; {6, -3, 2, -5, 4, -4, 6, -3, -5, 4, 0, 0}; {-5, -1, 5, -1, -3, 2, 1, 5, 5, 2, 0, 0}; {6, -2, 4, -2, -4, 1, 0, 5, 4, 2, 0, 0}; {4, -5, 0, 5, 3, -5, 5, -4, 6, 3, 0, 0}; {5, -3, 3, -3, -4, 1, 0, 4, 4, 1, 0, 0}; {6, -1, 6, 1, 1, -5, -5, 0, 1, 0, 0, 0}; {3, 6, -1, 4, 2, 6, 4, -5, 6, 4, 0, 0}; {-5, 0, -5, 2, 2, -5, -4, 0, 2, 0, 0, 0}; {5, -3, 3, -3, -4, 0, 1, 4, 3, 3, 0, 0}; {-5, 1, -3, 5, 6, 0, 3, -4, -1, -1, 0, 0}; {2, 5, -2, 4, 2, 6, 4, -5, 6, 4, 0, 0}; {3, -5, 1, -4, -5, 0, -1, 3, 4, 1, 0, 0}; {0, 2, 6, -1, -4, -1, -3, -2, -4, 5, 0, 0}; {1, 4, -3, 3, 1, 5, 4, -5, 6, 3, 0, 0}; {2, 6, 0, -5, -5, 0, -2, 2, 3, 3, 0, 0}; {1, -4, 5, 3, -5, 1, -1, 1, -4, -1, 0, 0}; {1, 5, -1, 6, -4, 2, 0, 6, 2, 0, 0, 0}; {6, -3, 2, -4, -3, 5, 2, -5, 4, -1, 0, 0}; {2, -5, 2, -2, 2, 6, 6, 2, -1, -1, 0, 0}; {6, -3, 2, -4, -2, 5, 2, -5, 4, 0, 0, 0}; {5, -5, -1, 4, 5, 0, -5, -1, -5, 1, 0, 0}; {4, 6, -2, 3, 4, -1, 6, -1, -5, 1, 0, 0}; {4, -5, 0, 6, -4, 4, 0, 6, 3, -1, 0, 0}; {2, 4, -4, 1, 2, -2, 5, -2, 6, 1, 0, 0}; {-5, 0, -5, 3, -5, 6, -4, -3, 5, 4, 0, 0}; {6, -1, 6, 2, 6, 5, -5, -3, 5, 5, 0, 0}; {4, -3, 4, 0, 4, 4, 6, -4, 4, 4, 0, 0}; {1, 3, -5, 0, 2, -2, 6, -2, -5, 1, 0, 0}; {6, -1, 6, 2, -5, 6, -5, -3, 4, 4, 0, 0}; {4, -3, 4, 0, 5, 4, 6, -4, 4, 4, 0, 0}; {4, -5, 0, 6, -1, -2, 1, -1, 6, 3, 0, 0}; {2, 6, 0, -5, 1, 5, 5, 0, -4, -5, 0, 0}; {3, 6, -1, 5, -1, -1, -2, 5, 2, -2, 0, 0}; {3, 6, -1, 5, -1, -1, 1, -2, -5, 1, 0, 0}; {1, 4, -3, 3, -3, -2, -2, 4, 1, -2, 0, 0}; {1, 4, -3, 3, -3, -1, -2, 5, 2, -1, 0, 0}; {2, 6, 0, -5, 3, 3, -5, -5, 1, 1, 0, 0}; {1, 4, -3, 3, -2, -2, -3, 5, 1, -2, 0, 0}; {-1, 1, 5, -2, 4, 3, 2, -4, 4, 0, 0, 0}; {2, 6, 0, -5, 3, 5, 4, 2, -2, -3, 0, 0}; {-1,2,-5, 1, -4, -3, -3, 4, 1, -2, 0, 0}; {4, -5, 0, 6, 3, -5, 5, -5, 6, 4, 0, 0}; {4, -5, 0, 6, 3, -5, 5, -4, -5, 4, 0, 0}; {2, 4, -4, 1, -3, 0, -2, -1, -4, 5, 0, 0}; {5, -3, 3, -2, -4, 1, 1, 4, 4, 1, 0, 0}; {3, 6, -1, 5, 2, 6, 5, -5, 6, 3, 0, 0}; {3, 6, -1, 5, 2, 6, 5, -4, 6, 3, 0, 0}; {2, -5, 2, -2, -3, 3, 6, -1, -1, 1, 0, 0}; {3, 6, -1, 5, 2, -5, 4, -5, 6, 4, 0, 0}; {-3, 3, -1, -4, -4, 2, 4, -4, 0, -1, 0, 0}; {2, 4, -4, 1, -3, -1, -1, -1, -5, 3, 0, 0}; {2, 5, -2, 5, 2, 6, 4, 6, 6, 4, 0, 0}; {0, 2, 6, 0, -4, -1, -3, -2, -4, 5, 0, 0}; {0, 3, -4, 3, 0, 5, 3, 6, 5, 3, 0, 0}; {2, 5, -2, 5, 2, -4, 3, 5, 5, 4, 0, 0}; {6, -3, 2, -3, -3, 2, 1, 5, 3, 0, 0, 0}; {-5, -1, 5, 1, 3, -3, -4, 2, 0, -1, 0, 0}; {2, 4, -4, 2, 2, -2, 5, -2, 6, 0, 0, 0}; {2, 4, -4, 2, 2, -2, 5, -2, 5, 0, 0, 0}; {-2, 3, -2, -5, -1, 4, 5, 0, -2, -2, 0, 0}; {-5, 0, -5, 4, -4, 2, 3, -1, -3, -4, 0, 0}; {-5, -1, 5, 1, 4, -2, -3, 3, 0, -1, 0, 0}; {6, -2, 4, 0, 3, -3, -4, 2, -1, -2, 0, 0}; {3, -5, 1, -3, 0, 6, 6, 0, -1, -3, 0, 0}; {3, -5, 1, -3, 0, 6, 6, 1, -1, -3, 0, 0}; {4, -5, 0, -5, -3, 3, 0, 6, 2, -1, 0, 0}; {3, -5, 1, -3, 0, -5, 6, 1, -1, -3, 0, 0}; {3, 6, -1, 6, -4, 3, 0, 6, 2, -1, 0, 0}; {1, 3, -5, 1, 2, -2, 5, -2, 6, 1, 0, 0}; {-1, 0, 3, -4, -4, 3, -3, 1, -4, 2, 0, 0}; {3, -3, 5, 3, -3, 3, 6, 5, 6, 1, 0, 0}; {4, -4, 2, -2, 2, -5, -5, 1, -1, -2, 0, 0}; {1, 4, -3, 4, -5, 2, -1, 5, 2, -1, 0, 0}; {-2, 0, 4, -2, 0, -5, 3, -4, 5, 0, 0, 0}; {2, 6, 0, -4, 2, 5, 6, 1, -1, -2, 0, 0}; {-1, 2, -5, 2, -4, -2, -3, 4, 1, -1, 0, 0}; {2, 6, 0, -3, -1, 6, 6, 0, -1, -3, 0, 0}; {1, 4, -3, 5, 6, 2, -1, 2, 0, -4, 0, 0}; {-1, 1, 5, 0, 0, -4, -3, 4, 4, -1, 0, 0}; {2, -3, 6, 6, 0, -5, 0, 1, 4, -1, 0, 0}; {2,-3, 6, 6, 0, -4, 0, 1, 4, -1, 0, 0}; {4, -3, 4, 2, 6, 1, 2, -3,

-4, -4, 0, 0}; {0, 4, -2, -5, -2, 5, 5, 0, -2, -4, 0, 0}; {1, 4, -3, 5, -5, 2, -1, 5, 1,-1,0,0}; {-2, 3, -2, -4, 1, 1, 3, 6, 3, 4, 0, 0}; {-3, 3, -1, -1, 3, -2, -1, -4, 6, -4, 0, 0}; {-4, -1, 4, 1, 3, -1, -4, 0, -1, -5, 0, 0}; {4, -1, -4, -3, 3, 4, -2, 2, -1, -2, 0, 0}; {-2, 4, 0, 0, 5, -1, 3, 4, 5, 0, 0, 0}; {-1, 5, 1, 1, 6, 0, 4, 4, 6, 1, 0, 0}; {0, 5, 0, -1, 3, -1, 0, -4, -5, -5, 0, 0}; {-5, 0, -5, -5, 3, -3, 6, 6, 6, -1, 0, 0}; {6, -2, 4, 3, -2, 3, -1, -3, -3, 1, 0, 0}; {4, -2, 4, 2, 1, -4, 2, -3, -3, -5, 0, 0}; {-1, 5, 1, 2, 6, -5, 1, 5, 3, 0, 0, 0}; {6, -3, 2, 0, 2, -3, 5, 0, -1, 3, 0, 0}; {1, -5, 3, 4, -3, -4, 2, 5, 1, 0, 0, 0}; {-4, 0, 6, 5, -4, 5, 1, -4, -3, 2, 0, 0}; {6, -3, 2, 0, 2, -2, 5, 1, 0, 4, 0, 0}; {-3, 2, -3, -3, 1, 0, 6, -5, 3, 0, 0, 0}; {-3, 2, -3, -3, 2, -2, -5, -5, 5, -1, 0, 0}; {-5, -1, 5, 4, -4, 3, 0, -3, -4, 1, 0, 0}; {-4, 1, -4, -4, 1, 0, 4, -5, 2, 0, 0, 0}; {2, -5, 2, 2, -5, 1, 5, 5, 6, 0, 0, 0}; {-4, 1, -4, -4, 2, -3, -5, -5, 5, -1, 0, 0}; {5, -3, 3, 2, -5, 2, -1, -3, -4, 0, 0, 0}; {2, 6, 0, 0, 6, 0, -3, -4, -5, 0, 0, 0}; {2, 6, 0, 0, 6, 0, -3, -3, -5, 0, 0, 0}; {3, -4, 3, 4, -1, 6, 4, 5, 4, -2, 0, 0}; {1, 5, -1, -1, 5, 0, -4, -4, 6, -1, 0, 0}; {-2, 2, -4, -4, 2, 3, -3, 6, -1, 0, 0, 0}; {3, -5, 1, 1, -4, 1, -2, -4, -4, 0, 0, 0}; {1, 4, -3, -4, 2, 6, 2, -1, -2, 1, 0, 0}; {0, 3, -4, -5, 1, 6, 1, 0, -2, 2, 0, 0}; {2, 0, 0, 6, 1, 5, -1, 4, 4, -3, 0, 0}; {0, -3, -4, 1, -5, -1, -5, 4, -5, -2, 0, 0}; {4, -3, 4, 5, -2, -5, 4, 5, 4, -2, 0, 0}; {3,-5, 1, 1, 6, 1, -3, -3, 6, 0, 0, 0}; {4, -3, 4, 5, -1, -5, 4, 5, 4, -2, 0, 0}; {3, -5, 1, 2, -5, 0, -2, -2, -5, 1, 0, 0}; {-1, 2, -5, -5, 0, 5, 1, -1, -3, 1, 0, 0}; {-5, 0, -5, -3, 4, 1, 0, 2, -3, -3, 0, 0}; {-1, 2, -5, -5, 1, 5, 2, -1, -3, 1, 0, 0}; {-2, 1, 6, 6, 0, 5, 1, -2, -3, 1, 0, 0}; {-2, 1, 6, 6, 0, 5, 1, -1, -3, 0, 0, 0}; {5, 0, -3, 1, -1, 1, -3, -1, 6, -5, 0, 0}; {-2, -5, 6, 0, 5, -2, 6, 3, -5, -2, 0, 0}; {6, -1, 6, -4, -3, -2, 3, -4, 6, 3, 0, 0}; {-4, 3, 0, 4, -4, -3, 4, 0, 0, 0, 0, 0}; {-1, -3, -3, 4, -1, 3, -2, 2, 3, -4, 0, 0}; {-3, 5, 3, -4, 1, 4, -1, -5, -3, -1, 0, 0}; {6, 0, -4, -1, 2, 3, -3, 3, 3, 1, 0, 0}; {6, 0, -4, -1, 2, 3, -3, 4, 2, 1, 0, 0}; {-5, 2, -1, 3, -5, -3, 4, 0, 0, -1, 0, 0}; {6, 1, -2, 2, 6, -4, 3, -1, 0, 1, 0, 0}; {-5, 3, 1, 6, -1, 2, -2, -5, -3, -1, 0, 0}; {-4, 5, 4, -2, 4, -4, 5, 3, -5, -2, 0, 0}; {6, 0, -4, -1, 2, 4, -3, 3, 2, 1, 0, 0}; {5, -1, -5, -2, 1, 3, -4, 3, 1, 1, 0, 0}; {4, -2, 6, -3, 0, 2, -4, 3, 2, 1, 0, 0}; {4, -2, 6, -3, 1, 0, 6, 4, 1, 2, 0, 0}; {-5, 3, 1, 6, 0, 2, -2, -5, -3, -1, 0, 0}; {5, 0, -3, 1, 6, -5, 2, -2, -1, 1, 0, 0}; {6, 2, 0, 5, -1, 1, -3, -4, -4, -2, 0, 0}; {3, -3, 5, -4, 0, 0, 6, 3, 1, 2, 0, 0}; {4, -1, -4, 0, 5, 6, 1, 0, -2, 0, 0, 0}; {0, 5, 0, 2, 5, 4, -3, 6, 3, 3, 0, 0}; {3, -2, -5, -1, 4, 5, 1, -2, -1, 0, 0, 0}; {2, -4, 4, -5, -1, -1, 6, 2, 1, 2, 0, 0}; {6, 3, 2, -4, 3, -5, 3, 5, 5, -3, 0, 0}; {5, 2, 1, -5, 2, 6, 3, 4, 5, -4, 0, 0}; {5, 2, 1, -5, 2, 6, 3, 4, 5, -3, 0, 0}; {1, -4, 5, -3, 2, 4, 0, -2, -2, -2, 0, 0}; {1, -3, -5, 0, 6, -2, -5, 6, -5, -2, 0, 0}; {0, 5, 0, 2, -5, -2, -1, -3, 5, 0, 0, 0}; {-3, 2, -2, 0, 5, -3, -2, -5, 4, -1, 0, 0}; {4, 6, -1, -2, 4, -4, 3, 1, -2, 1, 0, 0}; {-5, 3, 2, -5, -1, 3, -2, 6, -1, 0, 0, 0}; {6, 2, 1, 6, -2, 2, -2, 6, -2, 0, 0, 0}; {6, 2, 1, 6, -1, 2, -3, 6, -3, -1, 0, 0}; {6, 2, 1, 6, -1, 3, -3, 6, -1, 0, 0, 0}; {2, -5, 3, 5, -5, -4, 1, 6, 5, 2, 0, 0}; {4, 0, -1, 4, -3, 1, -3, 6, -3, -1, 0, 0}; {4, -1, -3, 1, 6, -5, 1, -2, 0, 2, 0, 0}; {3, -2, -4, 0, 5, 6, 1, -3, -1, 1, 0, 0}; {3, -2, -4, 0, 5, 6, 1, -2, -1, 1, 0, 0}; {4, 1, 1, -5, 2, 6, -1, 5, 4, -3, 0, 0}; {2, -3, -5, -1, 4, 6, 1, -3, -1, 1, 0, 0}; {3, -1, -2, 3, -3, 0, -4, 5, -4, -1, 0, 0}; {4, 2, 3, -2, 6, -1, -3, 0, 2, -5, 0, 0}; {1, -2, -2, 4, -1, 4, 1, 3, 4, -5, 0, 0}; {-1, 6, 4, -4, 1, 4, 0, -3, -2, 0, 0, 0}; {6, -5, -1, -3, -3, 4, -2, 5, 2, 5, 0, 0}; {-3, 5, 4, -3, 4, -4, 5, 6, 5, -4, 0, 0}; {-3, 3, 0, 4, -3, -4, 3, 2, -1, 1, 0, 0}; {-1, -5, 6, 0, -5, -3, 5, -5, 6, -2, 0, 0}; {-3, 4, 2, -5, 1, 2, -3, -1, -4, 0, 0, 0}; {-2, 6, 5, -1, 6, -4, 4, -5, 5, -2, 0, 0}; {2, 2, 5, 3, 2, -4, 1, -4, 4, 6, 0, 0}; {-4, 4, 3, -3, 4, -5, 4, 5, 5, -4, 0, 0}; {-2, 6, 5, -1, 6, -3, 6, 3, -5, -1, 0, 0}; {-5, 2, 0, 5, -1, 1, -2, -5, -3, 0, 0, 0}; {-4, 0, -5, -3, -5, 1, 4, 1, -2, -5, 0, 0}; {-2, -5, -5, 2, 6, -2, 6, 4, -4, -2, 0, 0}; {-5, 2, 0, 5, -5, -2, 4, -1, 1, -1, 0, 0}; {6, 1, -1, 4, 6, -3, 4, -1, 1, -1, 0, 0}; {6, 1, -1, 4, 6, -3, 4, -1, 1, 0, 0, 0}; {-5, 3, 2, -4, 0, 3, -3, -5, -2, 0, 0, 0}; f 5, 0, -2, 3, 6, -4, 3, -1, 0, -1, 0, 0}; {5, 0, -2, 3, 6, -3, 3, -2, 0, -1, 0, 0}; {2, -3, -5, 0, 3, 6, 0, -3, -1, 1, 0, 0}; {3, -3, 6, -2, 0, 2, -4, 2, 3, 1, 0, 0}; {2, -4, 5, -3, -1, 1, -5, 2, 2, 1, 0, 0}; {4, 0, -1, 5, -3, 1, -3, 6, -3, -2, 0, 0}; {5, 5, -4, 6, 2, -2, 2, -3, 3, 5, 0, 0}; {3, -1, -2, 4, -4, 1, -4, 5, -3, -1, 0, 0}; {0, 5, 1, 4, 5, -5, 0, 5, 5, 2, 0, 0}; {5, 2, 2, -3, 3, 6, 2, 4, 5, -3, 0, 0}; {2, -3, -5, 0, 4, 5, 0, -2, -2, 0, 0, 0}; {3, 0, 0, -5, 1, 5, 1, 3, 4, -4, 0, 0}; {5, 1, 0, 6, -1, 2, -2, 6, -3, -2, 0, 0}; {2, -3, -5, 0, 4, 6, 1, -2, -1, -1, 0, 0}; {2, -2, -3, 3, -4, 0, -5, 5, -4, -1, 0, 0}; {0, -3, -3, 4, -2, 3, -1, 2, 3, -5, 0, 0}; {0, 6, 3, -5, -2, 0, 6, 1, 1, 0, 0, 0}; {1, -5, 4, -4, -1, 1, -5, 2, 2, 1, 0, 0}; {0, 6, 3, -5, -2, 0, 6, 1, 1, 1, 0, 0}; {1, -4, 6, -1, 3, 6, 1, -3, -1, 0, 0, 0}; {0, -5, 5, -2, 2, 5, 0, -3, -2, -2, 0, 0}; {-1, 5, 2, 6, -3, -1, 5, 1, 1, 1, 0, 0}; {-3, 2, -2, 1, 3, 5, -2, 5, 3, 2, 0, 0}; {1, -3, -4, 2, -4, -2, 6, -5, -5, -2, 0, 0}; {-2, 4, 1, 5, -3, -3, 4, 1, 0, 1, 0, 0}; {-1, 6, 4, -3, 2, 3, -1, -2, -3, -1, 0, 0}; {0, -4, -5, 1, -5, -3, 6, -5, 6, -3, 0, 0}; {-1, -5, 6, 0, 6, -3, 4, -5, 6, -2, 0, 0}; {-3, 4, 2, -5, 0, 2, -3, -2, -4, 0, 0, 0}; {-1, -5, 6, 0, 6, -3, 5, -5, 6, -2, 0, 0}; {0, -3, -3, 4, -1, 3, 0, 3, 4, -3, 0, 0}; {0, -4, -5, 1, -5, -2, 6, 5, -4, -1, 0, 0}; {1, -2, -2, 5, 0, 4, 1, 2, 4, -4, 0, 0}; {-1, -4, -4, 3, -2, 2, 0, 2, 3, -5, 0, 0}; {0, -4, -5, 1, -5, -2, -5, 4, -4, -1, 0, 0}; {-2, 5, 3, -4, 1, 3, -1, -3, -3, -2, 0, 0}; {-4, 2, -1, 3, -5, -4, 3, 0, 0, 1, 0, 0}; {0, -3, -3, 4, -1, 3, 1, 2, 4, -4, 0, 0}; {-2, 6, 5, -1, 5, -4, 5, 5, 6, -3, 0, 0}; {-4, 4, 3, -3, 3, -5, 4, 5, 5, -5, 0, 0}; {6, -1, -5, -2, 1, 2, -4, 4, 2, 2, 0, 0}; {6, 0, -3, 2, 6, 6, 1, 0, -2, 0, 0, 0}; {6, 1, -1, 5, -2, 0, -5, -3, -5, -1, 0, 0}; {5, 0, -2, 4, -3, -1, 6, -4, -5, -1, 0, 0}; {6, 1, -1, 5, -2, 0, -4, -4, -5, -2, 0, 0}; {-5, 3, 2, -3, 3, 6, 3, 5, 4, -4, 0, 0}; {-4, 5, 5, 1, -4, 1, -2, 0, 2, -5, 0, 0}; {-5, 3, 2, -3, 3, -5, 3, 5, 5, -4, 0, 0}; {4, -3, 5, -3, 1, 0, -4, 3, 2, -1, 0, 0}; {6, 2, 1, -4, 3, 6, 3, 5, 4, -4, 0, 0}; {-2, 2, -3, 0, 5, 2, 0, 5, 4, -1, 0, 0}; {-2, 2, -3, 0, 5, 2, 1, 5, 4, -1, 0, 0}; {-5, -1, 6, -3, 3, 0, -1, 4, 3, -2, 0, 0}; {-1, 6, 4, -2, -3, 1, 5, 0, 3, 0, 0, 0}; {0, -4, -5, 2, 2, -5, 1, -4, 0, -1, 0, 0}; {0, -3, -3, 5, -5, 0, -5, 5, -3, -3, 0, 0}; {-4, 3, 1, -5, -5, -1, 5, -1, 2, 0, 0, 0}; {5, 0, -2, 4, 5, -2, 2, -3, 0, -2, 0, 0}; {3, -3, 6, -1, -1, 3, -5, 1, 2, 0, 0, 0}; {-2,-4, -3, 6, -1, 5, 0, 1, 6, -4, 0, 0}; {2, -3, -5, 1, 3, -5, 1, -3, -1, -1, 0, 0}; {-4, 4, 3, -2, 1, -2, 4, -3, -1, -2, 0, 0}; {-4, 6, -5, 4, -2, 4, -1, 1, 6, -4, 0, 0}; {1, 0, 2, 0, -5, 2, 5, 0, 5, 6, 0, 0}; {0, 6, 3, -4, -2, 1, 6, 1, 2, 0, 0, 0}; {0, -5, 5, -1, 2, 6, 0, -4, -1, 0, 0, 0}; {-2, 4, 1, 6, -4, -1, 5, 0, 1, 0, 0, 0}; {-2, 6, 5, 0, 4, -2, 5, 3, -5, -2, 0, 0}; {6, -3, 3, 5, 4, -5, 4, -3, -5, 5, 0, 0}; {1, -2, -2, 6, 0, 3, -2, 3, 2, -4, 0, 0}; {-3, 3, 0, 5, -4, -2, 5, 0, 1, 0, 0, 0}; {1, 4, -2, 1, 1, 5, 2, -4, 6, 2, 0, 0}; {1, 4, -2, 1, 1, 5, 3, -4, 6, 3, 0, 0}; {-5, 3, 2, -2, 3, 6, 1, 5, 4, -3, 0, 0}; {6, 1, -1, 6, -1, 0, -5, -3, -5, -1, 0, 0}; {5, 0, -2, 5, -2, 3, 2, 4, -2, 1, 0, 0}; {6, 1, -1, 6, 0, 5, -2, 2, 2, 3, 0, 0}; {1, -5, 4, -2, 3, 3, -1, -2, -4, -1, 0, 0}; {-2, 1, -5, -2, 1, -3, 5, -4, 6, 0, 0, 0}; {-3, 1, -4, 0, 4, 2, -1, 5, 3, -1, 0, 0}; {-4, -1, 5, -4, 0, -4, 4, -4, 6, 0, 0, 0}; {5, -4, 2, 5, -2, 6, 3, -4, 6, -1, 0, 0}; {3, 6, 0, 3, -2, -1, -3, 5, -2, -3, 0, 0}; {4, -1, -3, 4, 4, -3, 2, -4, 0, -1, 0, 0}; {4, -1, -3, 4, 4, -3, 3, -3, 1, 0, 0, 0}; {-1, 2, -4, -1, -5, -3, 6, 2, -3, -4, 0, 0}; {0, -5, 5, 0, 1, 6, 2, 6, 0, 0, 0, 0}; {-1, 5, 2, -4, -4, 1, 4, -2, 1, 0, 0, 0}; {4, 0, -1, -5, -2, -4, 2, -5, -2, -3, 0, 0}; {-2, 3, -1, 4, 4, -3, -2, 4, 2, 1, 0, 0}; {-4, 0, -5, -1, -2, 2, 2, -5, 4, 3, 0, 0}; {6, -2, 5, -3, -4, 1, -1, 5, 5, 1, 0, 0}; {4, -5, 1, 4, 3, -5, 4, -3, -5, 3, 0, 0}; {3, 6, 0, 3, 2, 6, 3, -4, 6, 4, 0, 0}; {4, -4, 3, -5, -5, 0, -2, 4, 4, 1, 0, 0}; {3, 6, 0, 3, 2, 6, 4, -3, 6, 3, 0, 0}; {-3, -4, -2, -3, 4, -1, 3, -1, 4, 6, 0, 0}; {4, -4, 3, -4, -4, 0, 0, 5, 3, 2, 0, 0}; {6, 1, -1, -5, -1, 3, 2, 5, -1, 1, 0, 0}; {4, -1, -3, 5, -3, 2, 1, 3, -2, 1, 0, 0}; {1, -4, 6, 2, -5, 1, 0, 2, -4, 0, 0, 0}; {-1, 5, 2, -3, 1, 2, -3, -3, -5, -1, 0, 0}; {4, -1, -3, 5, -2, 2, 1, 4, -2, 1, 0, 0}; {3, -2, -4, 4, -3, 1, 0, 3, -3, 0, 0, 0}; {1, -5, 4, -1, 4, -3, 2, 4, 4, 4, 0, 0}; {1, 6, 2, -4, 0, -3, -2, -1, -5, 6, 0, 0}; {0, 6, 3, -2, 4, -4, 1, 4, 4, 4, 0, 0}; {-1, 5, 2, -3, 3, -5, 0, 4, 4, 3, 0, 0}; {6, -3, 3, -5, -2, 6, 3, -5, 5, -1, 0, 0}; {6, -3, 3, -5, -2, 6, 3, -4, 6, 0, 0, 0}; {-5, -1, 6, -1, 3, 1, -2, 4, 3, -1, 0, 0}; {3, -4, 4, -2, 3, 3, 6, -5, 4, 4, 0, 0}; {1, 5, 0, 5, -2, -3, 0, -2, 6, 4, 0, 0}; {0, 4, -1, 4, -3, -3, 0, -2, 6, 3, 0, 0}; {4, -5, 1, 5, -3, 5, 2, -5, 5, 0, 0, 0}; {4, -5, 1, 5, -3, 6, 2, -5, 5, 0, 0, 0}; {0, 4, -1, 4, -2, -3, 0, -2, 6, 4, 0, 0}; {-2, 2, -3, 2, -4, -5, -2, -2, -5, -5, 0, 0}; {-4, 0, -5, 0, 6, 6, -2, -4, 5, 1, 0, 0}; {-2, 2, -3, 2, -3, -4, -2, -2, 6, 5, 0, 0}; {-1, 3, -2, 3, -2, -3, 0, -2, 6, 4, 0, 0}; {-4, 0, -5, 0, -5, -5, -3, -3, 6, 5, 0, 0}; {-2, 3, -1, 5, 2, 2, 5, 6, 3, 4, 0, 0}; {-4, 0, -5, 0, -4, -5, -2, -3, 5, 5, 0, 0}; {4, -4, 3, -4, 4, 5, 5, 2, -5, -5, 0, 0}; {2, 6, 1, 6, 2, 4, 4, 0, -3, -5, 0, 0}; {2, 6, 1, 6, 2, 4, 4, 1, -5, -5, 0, 0}; {-1, 4, 0, 6, 3, -4, -2, 3, 3, 2, 0, 0}; {0, 5, 1, -5, 4, -3, -1, 4, 3, 2, 0, 0}; {-5, -2, -4, -4, 4, 1, 3, 1, -4, 6, 0, 0}; {-3, 1, -4, 1, -2, 2, 2, -5, 5, 3, 0, 0}; {-1, 5, 2, -3, -4, 2, 5, -1, 1, 0, 0, 0}; {-3, 1, -4, 1, -2, 2, 3, -4, 5, 3, 0, 0}; {-4, 1, -3, 3, 1, -5, -3, 2, 2, 2, 0, 0}; {-5, 0, -4, 2, 0, 6, -4, 1, 2, 2, 0, 0}; {-3, 3, 0, -5, -5, -1, 6, -2, 2, 1, 0, 0}; {-4, 1, -3, 3, 2, -5, -4, 2, 3, 0, 0, 0}; {-2, 5, 3, -1, 0, -5, -1, 6, -2, -2, 0, 0}; {6, -1, -5, 1, 0, 6, -5, 0, 2, 1, 0, 0}; {4, -5, 1, 5, 2, 6, 5, -3, -5, 3, 0, 0}; {5, -3, 4, -3, -5, 0, 0, 5, 4, 3, 0, 0}; {4,-5, 1, 5, 2, 6, 6, -2, 6, 3, 0, 0}; {3, 6, 0, 4, 2, 6, 4, -4, 6, 3, 0, 0}; {5, -3, 4, -3, -4, 1, 0, 5, 4, 2, 0, 0}; {3, -5, 2, -5, 6, -1, -2, 3, 4, 2, 0, 0}; {2, 5, -1, 3, 1, 5, 3, -4, 6, 4, 0, 0}; {3, -5, 2, -5, 6, -1, -2, 4, 4, 1, 0, 0}; {2, 5, -1, 3, 1, 5, 4, -4, 6, 3, 0, 0}; {2, 5, -1, 3, 1, 5, 5, -3, 6, 3, 0, 0}; {1, 4, -2, 2, 0, 5, 2, -5, 6, 2, 0, 0}; {-5, 1, -2, 5, 6, -2, 5, -4, 1, 0, 0, 0}; {-5, 0, -4, 2, 2, -5, -3, 3, 1, 0, 0, 0}; {5, 0, -2, 6, -4, 3, -4, 4, -4, -2, 0, 0}; {0, 3, -3, 2, 0, 4, 2, -5, 6, 2, 0, 0}; {0, 3, -3, 2, 0, 4, 3, -5, 6, 3, 0, 0}; {3, -4, 4, -1, -1, 5, 6, 0, 1, -1, 0, 0}; {0, 3, -3, 2, 0, 4, 3, -4, 5, 3, 0, 0}; {0, 3, -3, 2, 0, 5, 2, 6, 6, 2, 0, 0}; {-1, 2, -4, 1, 0, 4, 3, -5, 5, 3, 0, 0}; {0, 4, -1, 5, 5, -2, -2, 3, 2, 2, 0, 0}; {1, 6, 2, -3, -2, 4, 5, -1, 0, -1, 0, 0}; {-1, 3, -2, 4, 4, -3, -3, 2, 2, 2, 0, 0}; {2, -4, 5, 1, 3, 6, 6, 6, 0, 3, 0, 0}; {2, -4, 5, 1, 3, -5, 5, -4, 1, 2, 0, 0}; {0, -5, 5, 2, 6, 0, -1, 1, -4, -1, 0, 0}; {-3, 0, 6, -1, -1, -4, 4, -4, 6, 0, 0, 0}; {0, 5, 1, -4, 0, 5, 5, 2, -1, -2, 0, 0}; {3, 5, -2, 2, 3, -2, 6, -2, -5, 1, 0, 0}; {-4, 1, -3, 4, -4, 6, -5, -2, 6, 6, 0, 0}; {-5, 1, -2, 6, -1, 0, 2, 5, 3, 3, 0, 0}; {3, -4, 4, -1, 4, 4, 6, -5, 5, 4, 0, 0}; {2, 4, -3, 1, 3, -2, 6, -2, -5, 1, 0, 0}; {3, 6, 0, 5, -4, 4, 1, 6, 4, -1, 0, 0}; {2, 4, -3, 1, 3, -1, 6, -2, -5, 1, 0, 0}; {1, 3, -4, 0, 2, -2, 6, -2, -5, 1, 0, 0}; {2, 5, -1, 4, -5, 4, 1, 6, 4, -1, 0, 0}; {1, 4, -2, 3, -5, 4, 0, 6, 4, 0, 0, 0}; {1, 3, -4, 0, 3, -2, 6, -2, -5, 1, 0, 0}; {-2, 1, -5, 0, 5, 2, 0, 5, 4, -1, 0, 0}; {-4, 0, -5, 1, -5, 6, -4, -3, 6, 6, 0, 0}; {-4, 0, -5, 1, -5, 6, -3, -3, 5, 4, 0, 0}; {-5, -1, 6, 0, 6, 5, -3, -3, 4, 3, 0, 0}; {-5, -1, 6, 0, 6, 6, -4, -3, 6, 5, 0, 0}; {6, -2, 5, -1, 5, 5, -4, -4, 6, 5, 0, 0}; {5, -3, 4, -2, 4, 4, -4, -4, 3, 3, 0, 0}; {5, -3, 4, -2, 4, 5, -5, -4, 5, 4, 0, 0}; {6, -2, 5, -1, 5, 6, -3, -4, 3, 1, 0, 0}; {5, -3, 4, -2, 4, 5, -4, -4, 6, 6, 0, 0}; {-3, 1, -4, 2, -3, -5, -2, -2, 5, 4, 0, 0}; {-5, -1, 6, 0, -5, 6, -3, -3, 4, 3, 0, 0}; {-5, -1, 6, 0, -5, -5, -4, -3, 6, 5, 0, 0}; {6, -2, 5, -1, 6, 6, -4, -4, 6, 5, 0, 0}; {4, -4, 3, -3, 4, 4, -5, -5, 5, 5, 0, 0}; {2, 6, 1, -5, 2, 4, 4, 1, 6, 6, 0, 0}; {-5, -1, 6, 0, -4, 6, -3, -2, 4, 3, 0, 0}; {4, -5, 1, 6, 1, -1, 1, 0, 6, 4, 0, 0}; {0, 4, -1, 5, 1, 4, 3, 1, -5, -5, 0, 0}; {-2, 2, -3, 3, -1, 2, 2, -1, -4, -5, 0, 0}; {-4, -1, 5, -2, 5, -4, 6, 2, -3, -4, 0, 0}; {5, -3, 4, -2, -5, 0, 1, 5, 4, 2, 0, 0}; {6, -1, -5, 2, 0, 6, -4, 1, 2, 1, 0, 0}; {5, -3, 4, -2, -5, 0, 1, 6, 4, 2, 0, 0}; {2, 5, -1, 4, 1, 5, 4, -4, 6, 3, 0, 0}; {2, 5, -1, 4, 1, 5, 4, -4, 6, 4, 0, 0}; {3, -5, 2, -4, 6, -1, -1, 4, 4, 1, 0, 0}; {4, -3, 5, 0, -1, 5, -5, 0, 1, 1, 0, 0}; f 2, 5, -1, 4, 1, 5, 5, -3, 6, 3, 0, 0}; {2, 6, 1, -5, 5, -2, 0, 4, 4, 2, 0, 0}; {-2, 0, 5, -2, 6, -3, -4, -2, -5, 4, 0, 0}; {-1, 2, -4, 2, -1, 3, 3, 6, 5, 3, 0, 0}; {-2, 1, -5, 1, -2, 2, 3, -4, 4, 2, 0, 0}; {2, -5, 3, -1, -1, 5, 6, -2, 1, -1, 0, 0}; {-1, 3, -2, 5, 4, -3, -2, 1, 3, 1, 0, 0}; {-2, 1, -5, 1, -1, 4, 1, 5, 5, 3, 0, 0}; {-3, 1, -4, 3, 3, -4, -2, 3, 1, -1, 0, 0}; {-1, -1, 2, 5, 2, -2, 4, 5, 0, 4, 0, 0}; {3, 5, -2, 3, 3, -1, 6, -2, -5, 1, 0, 0}; {1, 2, 6, -2, -3, 5, -1, 2, -2, 3, 0, 0}; {2, 4, -3, 2, 2, -1, 6, -2, -5, 1, 0, 0}; {4, -2, -5, 4, -3, 2, 0, 1, -4, -1, 0, 0}; {1, 3, -4, 1, 2, -2, 5, -2, 6, 1, 0, 0}; {-2, 1, -5, 1, 5, 2, 0, 5, 4, -1, 0, 0}; {-5, -3, 2, -5, -2, -5, 4, -4, 6, 0, 0, 0}; {1, 5, 0, -5, 0, 5, 5, 0, -3, -4, 0, 0}; {6, -3, 3, -3, 2, 0, 1, 1, 5, 4, 0, 0}; {5, -3, 4, -1, 5, 4, -5, -4, 5, 5, 0, 0}; {1, 4, -2, 4, -2, -3, -1, -2, -5, 6, 0, 0}; {1, 4, -2, 4, -2, -3, -1, -1, 4, 3, 0, 0}; {1, 4, -2, 4, -2, -3, 0, -1, 4, 3, 0, 0}; {2, 6, 1, -4, 3, 3, -5, -5, 2, 2, 0, 0}; {1, 4, -2, 4, -2, -3, 0, -1, 5, 3, 0, 0}; {2, 6, 1, -4, 3, 4, -4, -5, 2, 1, 0, 0}; {-1, 2, -4, 2, -3, -4, -1, -2, 4, 3, 0, 0}; {0, 4, -1, 6, 2, 2, 6, -5, 1, 1, 0, 0}; {5, -4, 2, -4, 3, 5, -4, -4, 3, 1, 0, 0}; {-1, 2, -4, 2, -2, 3, 3, -5, 5, 2, 0, 0}; {6, -4, 1, -5, 4, -4, 6, -4, 6, 5, 0, 0}; {5, -5, 0, 6, 3, -5, 5, -4, 6, 4, 0, 0}; {0, 3, -3, 4, 2, -5, 2, 4, 5, 4, 0, 0}; {-5, -3, 2, -4, 5, -3, 6, -4, -5, 4, 0, 0}; {-5, -3, 2, -4, 5, -3, 6, -4, -5, 5, 0, 0}; {-3, -1, 4, -2, -1, -5, 2, -4, 4, -1, 0, 0}; {-2, 1, -5, 2, 4, 1, -3, 4, 1, -2, 0, 0}; {1, 6, 2, -1, 3, 2, 5, -4, 5, 5, 0, 0}; {5, 5, -4, 0, -1, -5, 1, 3, -1, 4, 0, 0}; {4, -4, 3, -1, 2, -4, -5, 2, -1, -2, 0, 0}; {1, 4, -2, 5, -5, 1, -1, 5, 1, -1, 0, 0}; {-2, 0, 5, -1, 0, -5, 3, -4, 4, 0, 0, 0}; {2, 6, 1, -3, 1, 6, 6, 1, -1, -2, 0, 0}; {-2, 1, -5, 2, 5, -2, -3, 3, 1, -1, 0, 0}; {-3, 0, 6, 1, 4, -3, -4, 3, 1, -2, 0, 0}; {-4, -1, 5, 0, 4, -3, -4, 2, -1, -3, 0, 0}; {-4, -1, 5, 0, 4, -2, -4, 3, 0, -2, 0, 0}; {1, 4, -2, 5, -2, 0, -3, 6, 1, -1, 0, 0}; {-4, -1, 5, 0, 5, -3, -4, 3, 0, -2, 0, 0}; {-3, 0, 6, 2, 4, 0, -3, 1, -1, -4, 0, 0}; {-3, 0, 6, 2, 4, 0, -3, 2, -1, -3, 0, 0}; {6,-4, 1, -4, -3, 5, 0, 6, 3, -1, 0, 0}; {-5, -2, 4, 0, 2, -1, -5, 2, 0, -3, 0, 0}; {6, -5, -1, 5, 5, 0, -5, -1, 6, 1, 0, 0}; {-1, 3, -2, -5, -2, 6, 5, 0, -3, -3, 0, 0}; {-3, 0, 6, 2, 4, -1, -3, 3, 0, -2, 0, 0}; {5, -5, 0, -5, -3, 4, -1, 5, 2, -2, 0, 0}; {5, -5, 0, -5, -3, 4, 0, 5, 2, -2, 0, 0}; {4, 6, -1, 6, -4, 3, -1, 5, 2, -2, 0, 0}; {5, -5, 0, -5, -3, 4, 0, 6, 3, -1, 0, 0}; {2, 3, -5, 1, 2, -3, 4, -3, 5, 0, 0, 0}; {-3, 1, -4, 5, -3, 4, 4, -1, -4, -4, 0, 0}; {3, 6, 0, -4, 0, 6, 6, 1, -1, -3, 0, 0}; {-1, 3, -2, -5, 1, -3, -3, 6, -4, 0, 0, 0}; {6, -4, 1, -3, -3, 5, 1, 4, 1, -3, 0, 0}; {1, 1, 4, -2, -4, 4, -2, 1, -5, 1, 0, 0}; {-5, 1, -2, -2, 3, 5, 1, 2, 1, -3, 0, 0}; {-1, 4, 0, -1, 3, -1, 0, -5, 6, -5, 0, 0}; {0, 6, 3, 4, -3, 5, -5, 4, 3, 6, 0, 0}; {-2, 6, 5, -3, 3, 5, 0, -5, -3, -4, 0, 0}; {1, -5, 4, 6, -1, 6, -4, 4, 3, -3, 0, 0}; {-3, 0, -5, 6, -2, 5, 1, -4, -3, 2, 0, 0}; {-2, 1, -4, -5, 1, 3, -3, 5, -1, -1, 0, 0}; {-3, 0, -5, 6, 0, 2, -4, 5, -1, -1, 0, 0}; {5, 6, -1, -4, 6, 0, -5, 2, 5, 0, 0, 0}; {4, -2, -4, -2, 3, 1, 4, 0, 1, 4, 0, 0}; {2, -4, 6, -3, 2, 0, 3, -1, 0, 4, 0, 0}; {6, 2, 2, -5, 2, 6, 3, 5, 5, -5, 0, 0}; {2, -3, -4, 0, 2, -5, 2, -4, 1, 1, 0, 0}; {3, -1, -1, 4, -3, 1, -4, 5, -2, -1, 0, 0}; {-1, 5, 3, 6, -3, -1, 5, 0, 2, 2, 0, 0}; {1, -4, -5, -1, 4, 5, 0, -3, -1, 1, 0, 0}; {-2, 5, 4, -4, 1, 4, -1, -5, -1, 0, 0, 0}; {-2, -5, -4, 2, -3, 2, 0, 2, 3, 6, 0, 0}; {-3, 6, -5, 1, -4, 1, -1, 2, 3, 6, 0, 0}; {-1, -5, -5, 1, -5, -3, 6, 5, -5, -2, 0, 0}; {-1, -4, -3, 4, -1, 3, 0, 2, 4, -4, 0, 0}; {-4, 4, 4, -2, 4, -5, 3, 6, 5, -2, 0, 0}; {-1, -5, -5, 1, -5, -2, 6, 4, -4, -1, 0, 0}; {-3, 5, 5, -1, 5, -4, 5, 5, 6, -3, 0, 0}; {6, 0, -2, 2, 6, -5, 2, 0, -1, 1, 0, 0}; {-5, 3, 3, -3, 3, 6, 3, 5, 5, -4, 0, 0}; {-5, 4, 5, 0, -5, 0, -2, 1, 2, 6, 0, 0}; {-4, 3, 2, -5, 0, 3, -1, -5, -2, 0, 0, 0}; {6, 0, -2, 2, 6, -4, 3, -1, 0, 1, 0, 0}; {-5, 2, 1, 6, -1, 2, -2, -5, -2, 0, 0, 0}; {4, 0, 0, 6, 0, 5, 2, 4, 4, -5, 0, 0}; {-5, 4, 5, 0, -4, 0, -2, 1, 2, -5, 0, 0}; {6, 1, 0, 5, -1, 1, -3, 6, -3, 0, 0, 0}; {-5, -2, 5, 6, 1, 1, -2, 5, -1, -3, 0, 0}; {-2, 4, 2, 6, -5, 0, 5, -4, 3, 1, 0, 0}; {4, 0, 0, 6, -2, 2, -3, 6, -2, -2, 0, 0}; {2, -2, -2, 4, -4, 0, -5, 5, -3, -1, 0, 0}; {2, -3, -4, 1, 4, -5, 2, -3, 0, -1, 0, 0}; {0, 6, 4, -4, -2, 0, 6, 1, 2, 1, 0, 0}; {1, -4, -5, 0, 3, 6, 1, -3, 0, 0, 0, 0}; {0, -1, 2, -1, 6, 2, 4, 0, 4, -5, 0, 0}; {-5, 3, 3, -3, 2, 1, -5, -2, -4, 0, 0, 0}; {1, -4, -5, 0, 4, 6, 1, -3, -1, -1, 0, 0}; {-2, 5, 4, -3, 1, 4, -1, -4, -2, 0, 0, 0}; {3, -3, -5, 0, 3, -1, 4, 4, 2, 4, 0, 0}; {-3, 5, 5, 0, 5, -4, 4, 5, 6, -3, 0, 0}; {-5, 2, 1, -5, -1, 3, -2, -5, -2, -1, 0, 0}; {5, -1, -3, 2, 5, -4, 2, -2, 0, 1, 0, 0}; {4, -4, 4, -5, -4, -3, 2, -5, 5, 3, 0, 0}; {-4, 2, 0, 5, -3, -5, 2, 1, 0, 2, 0, 0}; {5, 1, 1, -4, 2, 5, 2, 4, 4, -4, 0, 0}; {5, 0, -1, 5, -2, 1, -3, 6, -3, -1, 0, 0}; {4, -1, -2, 4, -3, 0, -4, 6, -3, -1, 0, 0}; {2, -3, -4, 2, -5, -2, 6, -5, 6, -2, 0, 0}; {2, -3, -4, 2, -4, -2, -5, -5, 6, -3, 0, 0}; {-3, 2, -1, 3, -1, 0, 2, -3, -4, 6, 0, 0}; {5, 0, -1, 5, 4, -4, 2, 6, 0, 0, 0, 0}; {-5, 2, 1, -5, 6, -2, 4, -1, 2, 0, 0, 0}; {4, -1, -2, 4, 3, -4, 1, 6, 0, 0, 0, 0}; {5, 0, -1, 5, 4, -3, 3, -5, 1, 0, 0, 0}; {4, -1, -2, 4, 4, -4, 3, -2, 1, -1, 0, 0}; {3, -2, -3, 3, 3, -4, 3, -3, 1, 0, 0, 0}; {-3, -5, -3, 6, -2, 3, -1, 1, 5, -5, 0, 0}; {5, 1, 1, -4, -2, 3, -3, 6, -2, -2, 0, 0}; {3, -2, -3, 3, 4, -4, 2, -3, 0, -2, 0, 0}; {-2, 5, 4, -2, -1, 6, 0, 4, 0, -1, 0, 0}; {0, 4, 0, 3, 2, -4, 0, -2, -4, 5, 0, 0}; {5, 2, 3, -1, 3, -4, 3, 3, -5, -3, 0, 0}; {4, 0, 0, -5, -2, 2, -3, 6, -2, -2, 0, 0}; {3, -1, -1, 6, -3, 1, -4, 6, -2, -1, 0, 0}; {0, -5, 6, 0, 2, 6, 0, -4, -1, -1, 0, 0}; {0, -5, 6, 0, 2, 6, 1, -3, 0, -1, 0, 0}; {-4, 3, 2, -4, -2, 4, -1, 3, -1, -1, 0, 0}; {-5, 3, 3, -2, 1, -2, 5, -2, -3, -2, 0, 0}; {0, -4, -4, 3, -5, -1, 6, 5, -4, -2, 0, 0}; {-2, 5, 4, -2, 1, 5, -1, -4, -1, -1, 0, 0}; {-2, 5, 4, -2, 1, 5, -1, -4, -1, 0, 0, 0}; {-4, 3, 2, -4, -1, 4, -2, -5, -1, 0, 0, 0}; {6, -1, -4, 0, 1, 4, -3, 3, 3, 1, 0, 0}; {-5, 3, 3, -2, 2, -3, 4, -2, -3, -1, 0, 0}; {0, -5, 6, 1, 4, -1, -5, 0, 0, -1, 0, 0}; {6, 1, 0, -5, -2, 3, -3, 6, -2, -1, 0, 0}; {3, -4, 5, -2, -1, 2, -4, 2, 3, 1, 0, 0}; {2, -5, 4, -3, -2, 2, -5, 1, 2, 1, 0, 0}; {-3, -1, 5, -5, 6, -2, 5, -1, -4, 4, 0, 0}; {5, 6, -1, 0, -2, 1, -4, 1, -2, 5, 0, 0}; {5, 1, 1, -3, 2, 5, 1, 4, 4, -3, 0, 0}; {0, 5, 2, -5, -2, 4, 5, 1, 0, -2, 0, 0}; {2, -2, -2, 6, 0, 3, -1, 3, 2, -4, 0, 0}; {6, 2, 2, -2, 5, 0, 4, 6, -2, 0, 0, 0}; {5, -1, -3, 3, -4, 2, 3, 0, -2, -2, 0, 0}; {-1, 6, 5, 0, 6, -4, 4, 6, 5, -2, 0, 0}; {5, -4, 3, 6, -3, 2, 0, -5, 5, 0, 0, 0}; {-3, 3, 1, -5, 2, 6, -1, 3, 4, 3, 0, 0}; {-3, 3, 1, -5, 2, 6, -1, 4, 4, 3, 0, 0}; {5, -4, 3, 6, -2, 6, 3, -5, 5, -1, 0, 0}; {4, -5, 2, 5, -3, 6, 2, -5, 5, 0, 0, 0}; {4, -4, 4, -4, 1, -1, -4, 3, 2, -2, 0, 0}; {0, 3, -2, 1, 6, 3, 1, 6, 4, -1, 0, 0}; {-5, 0, -3, 2, -3, -1, 2, -5, -5, 4, 0, 0}; {6, 1, 0, -5, 4, -3, 3, -3, 0, 0, 0, 0}; {5, -1, -3, 3, -1, 4, -4, 1, 3, 2, 0, 0}; {5, -3, 5, -3, 4, 5, 5, 0, -2, -5, 0, 0}; {6, 2, 2, -2, -3, 2, -3, 3, -3, -2, 0, 0}; {6, 1, 0, -5, 5, -3, 3, -2, 1, 0, 0, 0}; {5, -1, -3, 3, 0, 4, -4, 2, 3, 2, 0, 0}; {5, 0, -1, 6, 4, -3, 3, -3, 0, 0, 0, 0}; {5, 0, -1, 6, 4, -3, 3, -2, 1, 0, 0, 0}; {0, 4, 0, 4, 0, -3, 0, -1, -5, 5, 0, 0}; {3, -2, -3, 4, 3, -4, 1, -3, 0, -1, 0, 0}; {3, -2, -3, 4, 3, -4, 2, -4, 0, -1, 0, 0}; {2, -3, -4, 3, 2, -4, 1, -4, 0, -1, 0, 0}; {0, 6, 4, -2, -3, 0, 5, -3, 2, 1, 0, 0}; {2, -3, -4, 3, 3, -4, 1, -4, 0, -1, 0, 0}; {-1, 5, 3, -3, -4, 1, 4, -1, 2, 0, 0, 0}; {-2, 4, 2, -4, -5, 0, 4, -2, 1, 0, 0, 0}; {2, -2, -2, 6, -4, 1, -4, 5, -3, -2, 0, 0}; {1, -3, -3, 5, -5, 0, -5, 5, -3, -2, 0, 0}; {1, -3, -3, 5, -5, 0, -4, 4, -3, -2, 0, 0}; {-1, 6, 5, 0, 1, 6, 0, -4, 0, 0, 0, 0}; {-5, 0, -3, 2, 1, 5, -4, 2, 3, 1, 0, 0}; {-4, 2, 0, 6, 6, 0, 3, -3, 1, -1, 0, 0}; {6, 0, -2, 4, 4, -2, 3, -5, 1, 0, 0, 0}; {2, -4, 6, 0, 1, -4, 2, 5, 1, 0, 0, 0}; {2, -2, -2, 6, -3, -5, 2, -5, -3, -3, 0, 0}; {-2, 6, 6, 2, 5, -2, 5, 4, -4, -2, 0, 0}; {-3, 4, 3, -2, 0, 5, -1, -5, -1, -1, 0, 0}; {6, 0, -2, 4, 5, -2, 3, -2, 0, 0, 0, 0}; {6, 0, -2, 4, 5, -2, 4, -5, 2, 0, 0, 0}; {5, -1, -3, 3, 4, -3, 4, -4, 2, 1, 0, 0}; {4, -3, 6, -1, -1, 4, -5, 1, 2, 0, 0, 0}; {2, -5, 4, -2, -2, 4, 5, -1, 1, 0, 0, 0}; {2, -5, 4, -2, -2, 4, 5, -1, 2, 0, 0, 0}; {-1, 2, -3, 1, -1, 3, 2, -5, 6, 3, 0, 0}; {0, 4, 0, 5, 4, -2, -3, 3, 4, 0, 0, 0}; {0, 5, 2, -4, -3, 3, 5, 0, 0, -2, 0, 0}; {-3, 0, -5, -1, -2, 2, 2, -5, 5, 3, 0, 0}; {-4, -2, 4, -5, 5, -3, 5, -2, -4, 4, 0, 0}; {6, -4, 2, 5, 3, -5, 4, -3, -5, 5, 0, 0}; {2, -5, 4, -2, 1, 6, -5, 3, 0, -1, 0, 0}; {-4, 2, 0, -5, 0, 2, 5, 3, 5, 0, 0, 0}; {1, 4, -1, 3, -5, 4, 0, 6, 4, 0, 0, 0}; {-1, 1, -5, -2, 1, -3, 5, -3, 6, 0, 0, 0}; {-1, 1, -5, -2, 1, -3, 5, -3, -5, 1, 0, 0}; {-4, 2, 0, -5, 2, 6, -1, 3, 3, 3, 0, 0}; {-3, -1, 5, -4, 0, -4, 4, -3, -5, 1, 0, 0}; {6, -1, -4, 2, -3, -1, 3, 4, 3, 4, 0, 0}; {5, -2, -5, 1, -4, -1, 2, -5, 5, 4, 0, 0}; {3, -5, 3, -4, 2, 4, -5, -4, 6, 5, 0, 0}; {-3, 1, -3, 2, -2, -5, -3, -2, 6, 5, 0, 0}; {-4, 0, -4, 1, -3, -5, -3, -2, 6, 5, 0, 0}; {2, -5, 4, -2, -5, -2, -1, -3, 4, 5, 0, 0}; {0, -5, 6, 2, 1, 6, 0, 6, -2, -1, 0, 0}; {-1, 6, 5, 1, 0, 5, -1, 5, -2, -1, 0, 0}; {-2, 4, 2, -3, -5, -1, 5, -2, 1, 1, 0, 0}; {-3, 0, -5, -1, 6, -4, -5, 2, -3, -5, 0, 0}; {-4, -1, 6, -2, 5, -4, 6, 2, -4, -5, 0, 0}; {5, -4, 3, -5, 3, -1, 2, 0, -4, 6, 0, 0}; {4, -5, 2, 6, 2, -1, 2, -1, -4, 6, 0, 0}; {-4, 2, 0, -5, 6, -2, 4, -4, 1, 0, 0, 0}; {-2, 5, 4, 0, 0, 5, 0, 6, -1, -1, 0, 0}; {-5, 1, -1, 6, 5, -2, 3, -4, 0, 0, 0, 0}; {-5, 1, -1, 6, 5, -2, 3, -3, 0, 0, 0, 0}; {-5, -1, -5, 0, -3, 1, 2, -4, 5, 3, 0, 0}; {5, -3, 5, -2, -5, 0, 1, 6, 4, 2, 0, 0}; {2, 5, 0, 4, 1, 5, 4, -3, 6, 4, 0, 0}; {3, -5, 3, -4, 6, -1, -1, 5, 4, 1, 0, 0}; {4, -4, 4, -3, -5, 0, 1, -5, 3, 2, 0, 0}; {2, 5, 0, 4, 1, 5, 5, -2, 6, 4, 0, 0}; {5, -1, -3, 4, 4, -3, 4, -4, 1, 0, 0, 0}; {4, -2, -4, 3, 3, -3, 1, -5, -1, -1, 0, 0}; {1, 6, 3, -2, -3, 3, 5, -2, 1, 0, 0, 0}; {-1, 2, -3, 2, -1, 3, 4, -3, 5, 3, 0, 0}; {-4, -1, 6, -1, -4, 1, 1, 6, 5, 2, 0, 0}; {-4, -1, 6, -1, -3, 2, 0, 5, 5, 2, 0, 0}; {-4, -1, 6, -1, -3, 2, 0, 6, 6, 1, 0, 0}; {-2, 2, -2, 4, 3, -3, -4, 1, 3, 0, 0, 0}; {6, -4, 2, 6, 3, -5, 5, -3, -5, 4, 0, 0}; {6, -3, 4, -3, -4, 1, -1, 4, 5, 2, 0, 0}; {-2, 3, 0, -5, -3, 3, 5, 0, -1, -2, 0, 0}; {4, -5, 2, -5, -5, 0, -2, 3, 4, 3, 0, 0}; {5, -4, 3, -4, -4, 1, -2, 3, 4, 3, 0, 0}; {3, -3, -5, 3, -5, -2, 5, 6, 4, -2, 0, 0}; {-5, 1, -1, -5, -1, 3, 2, 4, -2, 1, 0, 0}; {6, 1, 0, -3, 3, -5, -2, -2, 2, -2, 0, 0}; {2, 4, -2, 2, 3, -1, 6, -2, -5, 1, 0, 0}; {-1, 1, -5, -1, 1, -3, 4, -3, 6, 0, 0, 0}; {-2, -1, 4, -5, -4, 3, -2, 1, -3, 2, 0, 0}; {-5, 1, -1, -5, 1, 6, -1, 2, 3, 3, 0, 0}; {6, 0, -2, 6, 0, 5, -2, 2, 2, 3, 0, 0}; {3, -5, 3, -3, 1, 6, 6, 2, 0, -2, 0, 0}; {-1, 2, -3, 2, 5, -2, -3, 4, 2, -1, 0, 0}; {5, -1, -3, 5, 0, 5, -2, 1, 2, 2, 0, 0}; {4, -4, 4, -2, 4, 4, -5, -4, 6, 5, 0, 0}; {6, -2, 6, 0, 6, 6, -2, -4, 6, 2, 0, 0}; {-1, 5, 3, -1, -5, -2, -3, 0, 5, -1, 0, 0}; {-2, 2, -2, 4, -2, 2, 3, -1, -3, -5, 0, 0}; {3, 6, 1, 6, 0, -2, 1, -1, -5, 5, 0, 0}; {4, -4, 4, -2, 5, 5, -5, -4, 5, 4, 0, 0}; {-4, -1, 6, -1, 5, 6, -2, -4, 4, 0, 0, 0}; {-1, 3, -1, 5, 0, 3, 3, 0, 6, 6, 0, 0}; {1, 4, -1, 4, -1, -3, 0, -1, 5, 4, 0, 0}; {6, -3, 4, -3, 4, 6, 6, 2, -4, -5, 0, 0}; {6, -3, 4, -3, 4, -5, 6, 2, -4, -5, 0, 0}; {0, 2, -4, 0, -5, -2, -5, 3, -2, -3, 0, 0}; {-2, 0, 6, -2, 5, -3, 6, 2, -2, -3, 0, 0}; {-1, 2, -3, 2, -2, 3, 2, -5, 5, 3, 0, 0}; {-5, -1, -5, 2, 1, -5, -5, 0, 2, 0, 0, 0}; {4, 6, 0, 5, 2, 6, 4, -4, 6, 4, 0, 0}; {3, 5, -1, 4, 1, 5, 4, -4, 6, 4, 0, 0}; {-5, -2, 5, -1, -3, 2, 0, 4, 5, 1, 0, 0}; {1, 3, -3, 2, 0, 5, 1, 6, 6, 2, 0, 0}; {-2, 0, 6, -1, 0, -4, 3, -4, 5, 0, 0, 0}; {-3, -1, 5, -2, -1, -4, 3, -4, 5, 0, 0, 0}; {6, 6, -2, 1, 0, -5, 1, 3, -2, 3, 0, 0}; {5, 5, -3, 0, -1, 6, 1, 3, -1, 3, 0, 0}; {1, -5, 5, 2, -5, 0, -1, 1, -5, 0, 0, 0}; {-1, 2, -3, 3, 5, -2, -3, 3, 2, -1, 0, 0}; {-3, -1, 5, -2, 0, -5, 3, -4, 5, 0, 0, 0}; {-4, -2, 4, -3, -1, 6, 2, -5, 4, -1, 0, 0}; {-5, -4, 1, 5, 6, 1, -4, -1, -5, 1, 0, 0}; {-5, -4, 1, 5, 6, 1, -4, 0, -4, 2, 0, 0}; {5, 6, -1, 3, 4, 0, -5, -1, -5, 1, 0, 0}; {-2, 3, 0, -4, 1, 1, 3, 6, 4, 4, 0, 0}; {2, 6, 2, -3, 1, 6, 6, 2, -1, -2, 0, 0}; {-1, 3, -1, 6, -2, 4, 4, 0, -2, -3, 0, 0}; {6, -3, 4, -1, -3, 2, 0, 3, 5, 1, 0, 0}; {-4, -2, 4, -2, -5, -1, 6, -5, -5, 6, 0, 0}; {-5, -3, 3, -3, -2, 6, 2, -5, 4, -1, 0, 0}; {5, 6, -1, 4, 4, 0, -5, -1, 6, 1, 0, 0}; {-1, 3, -1, -5, -2, 4, 5, 0, -2, -3, 0, 0}; {-2, 2, -2, 6, -3, 3, 4, -1, -2, -3, 0, 0}; {5, -5, 1, -5, -3, 4, 0, 6, 3, -1, 0, 0}; {5, -5, 1, -5, -3, 5, 0, 6, 3, -1, 0, 0}; {3, 4, -3, 2, 3, -2, 5, -2, 6, 0, 0, 0}; {6, -2, 6, 2, 6, 5, -5, -3, 6, 5, 0, 0}; {3, 4, -3, 2, 3, -1, 6, -2, -5, 1, 0, 0}; {0, 4, 0, -4, 0, 5, 5, 1, -2, -2, 0, 0}; {-3, 1, -3, 5, -3, 3, 4, -1, -3, -4, 0, 0}; {6, -3, 4, -1, 3, -4, -5, 2, -1, -3, 0, 0}; {2, 5, 0, -5, 0, 5, 5, 0, -2, -4, 0, 0}; {6, -3, 4, -1, 4, -4, -5, 3, 0, -2, 0, 0}; {4, -5, 2, -3, 2, 6, 6, 1, -1, -3, 0, 0}; {3, 6, 1, -4, 1, 5, 6, 1, -1, -3, 0, 0}; {1, 3, -3, 3, -4, -3, 0, -1, 5, 2, 0, 0}; {-2, -1, 4, -2, 6, -2, -5, -3, -5, 6, 0, 0}; {5, -5, 1, -4, -3, 5, 0, 5, 3, -2, 0, 0}; {4, 6, 0, -5, -4, 4, 0, 5, 2, -2, 0, 0}; {2, 4, -2, 5, -5, 3, -2, 3, 1, -3, 0, 0}; {1, 2, -5, 1, 2, -3, 4, -3, 5, 0, 0, 0}; {0, 1, 6, 0, 1, -4, 3, -4, 4, -1, 0, 0}; {3, -5, 3, 0, 4, 3, 5, -4, 5, 5, 0, 0}; {1, 3, -3, 4, -5, 1, -2, 4, 1, -2, 0, 0}; {4, -5, 2, -2, 3, -5, 6, 2, -1, -2, 0, 0}; {6, -3, 4, 1, 6, 1, 0, -4, -3, 1, 0, 0}; {6, -2, 6, 4, -5, 3, 3, -2, -4, -4, 0, 0}; {4, -5, 2, -1, 1, -3, -5, 1, -2, -3, 0, 0}; {-1, 1, -5, 3, 5, 1, -3, 1, 0, -4, 0, 0}; {4, -3, 6, 6, 0, -5, -3, 5, 4, -4, 0, 0}; {-3, 2, 0, 1, 6, 3, 6, 2, 3, 5, 0, 0}; {1, -3, -2, 3, -3, 0, -4, 5, -4, -4, 0, 0}; {-1, 6, 6, -1, 3, 4, -1, -3, -2, 0, 0, 0}; {-2, 6, -5, 1, 6, -2, 6, 4, -4, -3, 0, 0}; {-4, 4, 5, -1, 5, -4, 5, 4, 6, -4, 0, 0}; {6, 2, 3, -3, 3, -5, 4, 4, 6, -4, 0, 0}; {2, -2, -1, 5, 0, 4, 1, 4, 4, -3, 0, 0}; {2, -3, -3, 2, 2, -4, 2, 6, 1, -1, 0, 0}; {-4, 6, -3, 5, -3, 2, 0, 0, 4, 6, 0, 0}; {6, 3, 5, 0, 4, -4, 4, 3, -5, -4, 0, 0}; {2, -2, -1, 5, -4, 0, -4, 5, -2, -1, 0, 0}; {-5, 2, 2, -5, -3, 3, -2, 4, -1, 0, 0, 0}; {1, -5, 6, -1, 1, -5, 1, 5, 1, 0, 0, 0}; {1, -3, -2, 5, -3, 6, 2, -5, -5, -3, 0, 0}; {-1, 6, 6, 0, 3, -1, 6, -1, -3, -2, 0, 0}; {-2, 6, -5, 2, 6, 3, 0, 4, -4, -4, 0, 0}; {-1, -5, -4, 3, -5, 5, 1, -5, 6, -3, 0, 0};

{-1, 6, 6, 0, 3, 0, -5, -1, -3, -2, 0, 0}; {-2, 6, -5, 2, 6, 4, 0, 5, -4, -4, 0, 0}; {-2, 6, -5, 2, 6, -3, 5, 5, -5, -2, 0, 0}; {-4, 3, 3, -3, 0, 3, -2, -5, -2, -1, 0, 0}; {-5, 2, 2, -4, -1, 3, -2, -5, -2, -1, 0, 0}; {6, 0, -1, 4, 6, -3, 4, -1, 1, 0, 0, 0}; {-5, 2, 2, -4, 0, -3, 4, -4, -1, -2, 0, 0}; {6, 2, 3, -2, 3, -4, 4, 3, -5, -3, 0, 0}; {4, -1, -1, 5, -3, 1, -3, 5, -2, -1, 0, 0}; {3, -3, -4, 1, 4, -5, 2, -2, 0, 0, 0, 0}; {1, -5, 6, -1, 3, 6, 1, -3, 0, 0, 0, 0}; {2, -3, -3, 3, -4, 0, -4, 5, -3, -1, 0, 0}; {3, -5, 4, -5, 2, 3, 5, -2, -3, 4, 0, 0}; {2, -5, 5, -3, 6, -4, 0, 6, 6, 3, 0, 0}; {1, -4, -4, 2, 1, 6, 1, 6, 0, 0, 0, 0}; {0, -5, -5, 1, 0, 6, 0, 5, 0, 0, 0, 0}; {6, 4, -5, 4, -5, 2, -3, -1, 4, 6, 0, 0}; {1, -4, -4, 2, 2, -5, 0, -5, 0, -1, 0, 0}; {0, -5, -5, 1, 1, 6, 1, -4, 0, 0, 0, 0}; {3, -4, 6, -2, -4, 3, -5, -3, 5, 4, 0, 0}; {5, 2, 4, 0, 3, -4, 3, 3, -5, -4, 0, 0}; {3, 0, 2, -2, 1, 6, 2, 2, 6, -4, 0, 0}; {3, 0, 2, -2, 1, 6, 3, 2, 6, -4, 0, 0}; {1, -4, -4, 2, 3, -5, 1, -3, 0, -1, 0, 0}; {0, -5, -5, 1, 2, 6, 1, -4, 0, -1, 0, 0}; {-2, 4, 3, -4, -4, -1, 5, 0, 2, 1, 0, 0}; {-1, 6, 6, 0, 1, 5, 0, -4, 0, 0, 0, 0}; {5, 0, 0, 6, -5, 3, -2, 3, -1, -1, 0, 0}; {2, -4, -5, 0, 1, -4, 1, 5, 1, 0, 0, 0}; {1, -4, -4, 2, 4, 1, -5, 1, -2, -1, 0, 0}; {-5, 1, 0, 5, 6, -2, 4, -1, 1, 0, 0, 0}; {-4, 3, 3, -3, -1, 4, -1, -5, -1, -1, 0, 0}; {-5, 2, 2, -4, -2, 3, -2, 6, -1, 0, 0, 0}; {5, 0, 0, 6, -4, 2, -2, 4, -1, 0, 0, 0}; {3, -3, -4, 1, 2, -4, 2, 5, 1, 0, 0, 0}; {4, -1, -1, 5, -5, 2, -3, 2, -1, -1, 0, 0}; {1, -5, 6, 0, 1, -5, 1, -4, 0, 0, 0, 0}; {1, -5, 6, 0, 1, -5, 1, 5, 1, 0, 0, 0}; {0, 6, 5, -1, 0, 6, 1, 5, 1, 1, 0, 0}; {0, 6, 5, -1, 0, 6, 2, 6, 1, 1, 0, 0}; {-1, 5, 4, -2, -1, 5, 1, 5, 1, 1, 0, 0}; {1, -5, 6, 0, 1, -5, 0, -4, 0, 1, 0, 0}; {0, -5, -5, 2, 4, 0, -4, 0, -2, -2, 0, 0}; {0, -5, -5, 2, 4, 0, 5, -1, -3, -1, 0, 0}; {-1, 6, 6, 1, 3, 0, -5, 0, -3, -2, 0, 0}; {-2, 5, 5, 0, 2, -1, 6, -2, -1, -2, 0, 0}; {5, -4, 4, -5, 5, -1, 2, 0, -3, 6, 0, 0}; {3, 6, 2, 5, 3, -3, 1, -1, -4, 5, 0, 0}; {-5, 2, 2, -3, -1, 3, -2, -5, -2, -2, 0, 0}; {-4, 4, 5, 1, 4, -3, 5, 3, -4, -2, 0, 0}; {-5, 2, 2, -3, -1, 4, -2, -5, -1, -1, 0, 0}; {4, -1, -1, 6, -4, 2, -4, 5, -3, -2, 0, 0}; {-1, 5, 4, -2, 0, 6, 0, 4, 0, -1, 0, 0}; {-2, 6, -5, 3, -5, 4, 0, 6, -4, -3, 0, 0}; {-5, 3, 4, 0, 4, 2, -1, 4, -5, -4, 0, 0}; {-2, 0, -5, -3, -5, 0, 5, 0, -3, 6, 0, 0}; {3, -3, -4, 2, 4, -5, -4, 5, -1, 2, 0, 0}; {3, -2, -2, 5, -4, 1, -4, 5, -2, -1, 0, 0}; {0, 6, 5, -1, 2, 5, 0, -4, -1, 0, 0, 0}; {-5, 2, 2, -3, 3, 6, 2, 5, 4, -2, 0, 0}; {3, -3, -4, 2, -5, 1, 2, -1, -3, -1, 0, 0}; {3, -4, 6, -1, 6, -3, 1, 6, 5, 4, 0, 0}; {3, -3, -4, 2, -2, 2, -4, 1, 3, 2, 0, 0}; {2, -4, -5, 1, -2, 1, 6, 1, 3, 1, 0, 0}; {2, -5, 5, -2, 6, -4, 0, 6, 5, 4, 0, 0}; {0, 5, 3, -4, 4, 6, -2, 5, 5, 2, 0, 0}; {1, -5, 6, 0, -3, 0, 6, 1, 2, 2, 0, 0}; {1, -5, 6, 0, -3, 1, 6, 0, 2, 1, 0, 0}; {2, -3, -3, 4, 2, -5, 1, -3, -1, -1, 0, 0}; {1, -5, 6, 0, -3, 1, 6, 1, 2, 2, 0, 0}; {1, -5, 6, 0, -2, 1, 6, 0, 3, 1, 0, 0}; {-1, 5, 4, -2, -4, 0, 4, -1, 2, 0, 0, 0}; {-2, 2, -1, 3, -1, 1, 3, -3, 6, 4, 0, 0}; {0, -5, -5, 2, 1, 6, 0, 6, -1, -1, 0, 0}; {1, -4, -4, 3, 2, -5, 1, -4, -1, -1, 0, 0}; {0, -5, -5, 2, 1, 6, 0, -5, -1, -1, 0, 0}; {1, -4, -4, 3, 2, -5, 1, -3, 0, 0, 0, 0}; {-2, 4, 3, -3, -5, -1, 4, -1, 1, 1, 0, 0}; {-4, 1, -1, 4, 1, 5, -4, 2, 3, 2, 0, 0}; {-3, 3, 2, -4, 6, -1, 3, -2, 1, 0, 0, 0}; {-3, 3, 2, -4, 6, -1, 4, -2, 1, 0, 0, 0}; {-2, 5, 5, 0, -1, 5, -1, 6, -2, -1, 0, 0}; {-4, 2, 1, -5, 5, -1, 3, -3, 1, 0, 0, 0}; {-5, 1, 0, 6, 4, -2, 2, -4, 0, 0, 0, 0}; {-4, 0, -3, 1, -2, 6, -3, -2, 6, 5, 0, 0}; {2, -1, 1, -2, 0, 6, 1, 2, 6, -5, 0, 0}; {0, -5, -5, 2, 2, 6, 0, -4, 0, -1, 0, 0}; {0, -4, -3, 5, 6, -1, 6, 5, -4, -3, 0, 0}; {0, -4, -3, 5, 6, -1, 6, 5, -3, -3, 0, 0}; {-1, 6, 6, 1, 1, 5, 0, -4, -1, -1, 0, 0}; {0, -4, -3, 5, 6, -1, -5, 4, -4, -3, 0, 0}; {-1, 6, 6, 1, 1, 5, 0, -4, -1, 0, 0, 0}; {-3, 3, 2, -4, -5, -2, 4, 0, 1, 0, 0, 0}; {-2, 4, 3, -3, -4, 0, 4, -1, 2, 0, 0, 0}; {-2, 5, 5, 0, 0, 5, -1, -5, -2, -2, 0, 0}; {-2, 5, 5, 0, 0, 5, -1, -5, -2, -1, 0, 0}; {-2, 4, 3, -3, -4, 0, 5, 0, 3, 1, 0, 0}; {-3, 3, 2, -4, -5, -1, 4, -1, 2, 1, 0, 0}; {-4, 2, 1, -5, 6, -2, 3, -2, 1, 1, 0, 0}; {-2, 5, 5, 0, 0, 5, -1, -4, -1, -2, 0, 0}; {-4, 2, 1, -5, 6, -2, 3, -1, 1, 0, 0, 0}; {-4, 2, 1, -5, 6, -2, 3, -1, 1, 1, 0, 0}; {-5, 1, 0, 6, 5, -2, 2, -3, 0, 0, 0, 0}; {6, 0, -1, 5, 4, -3, 2, -3, 0, 1, 0, 0}; {-3, 4, 4, -1, -1, 5, -1, -5, -1, -1, 0, 0}; {-2, 3, 1, 6, 5, 0, 5, -5, 3, 2, 0, 0}; {-1, 6, 6, 1, 2, 0, 6, -2, -1, -2, 0, 0}; {6, -2, -5, -1, -3, 5, -3, -3, 5, 4, 0, 0}; {-2, 6, -5, 3, 5, -2, 5, 4, -4, -3, 0, 0}; {-3, 4, 4, -1, 0, 4, -1, -5, -1, -1, 0, 0}; {-2, 6, -5, 3, 5, -2, 6, 4, -4, -3, 0, 0}; {-4, 3, 3, -2, -1, 4, -2, -5, -2, -2, 0, 0}; {-4, 4, 5, 1, 3, -3, 4, 3, -5, -3, 0, 0}; {5, -1, -2, 4, 4, -4, 1, -2, 0, 1, 0, 0}; {5, -1, -2, 4, 4, -3, 2, -3, 0, -1, 0, 0}; {5, 0, 0, -5, -4, 2, -4, 5, -3, -1, 0, 0}; {5, -1, -2, 4, 4, -3, 3, -2, 1, 0, 0, 0}; {-2, 4, 3, -2, -1, 5, -1, 6, -1, 0, 0, 0}; {-3, 2, 0, 6, 6, 0, 3, -3, 1, 0, 0, 0}; {-4, 2, 1, -4, -3, 5, -2, 5, -2, -1, 0, 0}; {-5, -3, 4, -5, 4, -4, 5, -2, -5, 5, 0, 0}; {-2, 3, 1, -5, -5, 2, 3, -2, 1, -2, 0, 0}; {-1, 1, -4, -1, -4, 2, 5, 1, -2, -5, 0, 0}; {3, 4, -2, 0, -3, 0, -4, 1, -3, 6, 0, 0}; {6, 1, 1, -3, 3, 5, 1, 4, 3, -3, 0, 0}; {3, -3, -4, 3, -2, 3, -3, 1, 2, 2, 0, 0}; {5, 6, 0, 2, 5, 0, -4, -1, -4, 1, 0, 0}; {-1, 4, 2, -4, 3, 4, -4, 5, 5, 2, 0, 0}; {0, 6, 5, 0, -4, -1, 4, 1, 3, 0, 0, 0}; {0, 6, 5, 0, -4, 0, 6, 0, 1, 1, 0, 0}; {-1, 5, 4, -1, -5, -1, 5, 0, 1, 1, 0, 0}; {1, -5, 6, 1, -3, 2, -5, 1, 2, 2, 0, 0}; {6, -4, 3, 6, -1, 6, 3, -4, 6, 0, 0, 0}; {-3, 3, 2, -3, 6, -3, 3, 0, 1, 0, 0, 0}; {-2, 5, 5, 1, -1, 3, -1, -4, -2, -2, 0, 0}; {-1, 6, 6, 2, 0, 5, 0, -5, -2, -1, 0, 0}; {-2, 4, 3, -2, -5, -1, 5, -1, 2, 1, 0, 0}; {-3, 3, 2, -3, 6, -2, 4, 0, 1, 0, 0, 0}; {-2, 4, 3, -2, -5, 0, 5, -1, 1, 1, 0, 0}; {-3, 4, 4, 0, -1, 4, -1, 6, -2, -1, 0, 0}; {-4, 0, -3, 2, -2, 1, 2, -2, 5, 5, 0, 0}; {-4, 0, -3, 2, -2, 1, 3, -3, 5, 4, 0, 0}; {-5, -1, -4, 1, -3, 0, 2, -3, 5, 4, 0, 0}; {5, -1, -2, 5, 3, -3, 2, -4, 0, 0, 0, 0}; {0, 2, -3, 0, -5, -2, -5, 3, -3, -4, 0, 0}; {3, -3, -4, 3, 2, -3, 1, -4, 0, -1, 0, 0}; {-5, 2, 2, -2, -2, 3, -2, 6, -2, -1, 0, 0}; {6, -2, -5, 1, 0, 6, -5, 1, 2, -1, 0, 0}; {-4, -2, 5, -3, -1, -5, 2, -5, 5, -1, 0, 0}; {0, 4, 1, -5, -1, 4, 5, 1, -1, -3, 0, 0}; {-2, 2, -1, 5, -3, 3, 4, 0, -1, -4, 0, 0}; {6, -4, 3, -5, -2, 6, 2, -5, 5, -1, 0, 0}; {3, 3, -4, -2, -1, 6, 0, 2, -2, 3, 0, 0}; {1, -5, 6, 2, -3, 2, -4, 0, 1, 2, 0, 0}; {0, 0, 5, -5, -3, 4, -1, 1, -2, 3, 0, 0}; {4, -4, 5, -1, -5, 0, 1, -4, 4, 4, 0, 0}; {-1, 1, -4, 0, 6, -2, -4, 3, -3, -4, 0, 0}; {-5, 2, 2, -1, -2, 3, -2, 4, -3, -2, 0, 0}; {1, 2, -4, 0, 5, 2, 5, 2, -2, -4, 0, 0}; {1, -4, -4, 6, -2, 3, -1, 1, 1, -5, 0, 0}; {-1, 4, 2, -2, 2, 1, 3, -5, 4, 5, 0, 0}; {-4, 0, -3, 4, -4, 2, 3, 0, -2, -4, 0, 0}; {2, 4, -1, 4, -5, 3, -1, 5, 3, -2, 0, 0}; {0, 0, 5, -4, -3, 4, -2, 1, -3, 2, 0, 0}; {4, -5, 3, -3, 1, 6, 6, 2, 0, -3, 0, 0}; {4, 6, 1, -5, -3, 4, 0, 6, 3, -1, 0, 0}; {2, 4, -1, 5, -5, 3, -1, 5, 3, -2, 0, 0}; {-5, 5, -4, -2, -4, 2, -5, -5, 2, 5, 0, 0}; {-4, -5, -1, 2, 1, -4, 2, 4, -1, 3, 0, 0}; {-3, -4, 0, 3, 2, -3, 2, 4, -2, 3, 0, 0}; {2, 5, 1, -4, 0, 5, 6, 1, -1, -3, 0, 0}; {3, 5, 0, 6, -3, 2, -1, 6, 2, -1, 0, 0}; {3, 6, 2, -3, 1, -5, 6, 2, -1, -3, 0, 0}; {-1, 0, 6, -1, 1, -4, 2, -4, 5, -1, 0, 0}; {-2, -1, 5, -2, 0, -5, 2, -4, 5, -1, 0, 0}; {6, -4, 3, -2, 2, -5, -5, 2, 0, -3, 0, 0}; {-4, -2, 5, 0, 5, -3, -5, 3, 0, -2, 0, 0}; {-2, 1, -3, 5, -3, 3, 4, -1, -2, -4, 0, 0}; {6, -1, -3, -4, 1, -4, -3, -5, 4, -5, 0, 0}; {-3, -4, 1, -5, 5, 2, -3, -1, 6, -1, 0, 0}; {-3, -3, 3, -2, -1, 6, 1, 4, 2, -3, 0, 0}; {4, 2, 6, 0, -4, 6, 1, 2, -4, 0, 0, 0}; {5, 5, -1, -5, 6, -1, 5, 1, 5, -1, 0, 0}; {2, -1, 2, -5, 3, -3, -4, 0, 2, 4, 0, 0}; {-4, 6, -2, 5, 0, 5, -4, -1, -5, -5, 0, 0}; {-1, -4, -1, 5, 1, -4, -5, -1, 1, 4, 0, 0}; {5, 6, 1, -1, -1, 4, -1, -3, 2, -3, 0, 0}; {0, -3, 0, 6, 2, -4, -5, -1, 1, 4, 0, 0}; {2, 0, 4, 0, 6, 4, 4, -3, 3, 5, 0, 0}; {1, -4, -3, 2, 5, 0, 5, 1, -3, -1, 0, 0}; {1, -5, -5, -1, 1, -5, 0, 6, 1, 0, 0, 0}; {-1, 5, 5, -3, -1, 6, -1, 5, 1, 0, 0, 0}; {0, -5, -4, 1, 4, 0, 6, 1, -2, -1, 0, 0}; {-2, -5, -2, 5, -1, -3, -5, 4, -5, -4, 0, 0}; {4, -1, 0, 5, -1, 1, -2, 6, -3, -4, 0, 0}; {3, 5, 1, 1, -4, -1, 6, 2, -3, -3, 0, 0}; {4, 2, 6, 2, -5, 3, 6, -3, 4, 5, 0, 0}; {3, -2, -1, 4, 6, 1, -5, 3, -2, 0, 0, 0}; {-2, 4, 4, -3, -2, 5, -1, 4, 0, 0, 0, 0}; {-1, 6, -5, 1, 3, 0, -5, 0, -2, -2, 0, 0}; {-4, 1, 0, 4, 4, -1, 4, -5, 3, 2, 0, 0}; {-2, 5, 6, 0, 2, -1, 6, -1, -3, -2, 0, 0}; {-3, 3, 3, -4, -3, 5, -1, 4, 0, 0, 0, 0}; {-5, -1, -3, 0, -1, 5, -3, -2, 6, 4, 0, 0}; {0, -3, 0, -4, 0, 4, 2, 1, 5, 6, 0, 0}; {-4, 4, 6, 1, 4, -3, 5, 3, -4, -3, 0, 0}; {-3, 4, 5, -1, 2, -3, 5, -2, -4, -2, 0, 0}; {-4, 3, 4, -2, 1, -3, 5, -3, -4, -3, 0, 0}; {-4, 3, 4, -2, 1, -3, 5, -2, -4, -2, 0, 0}; {-3, 6, -3, 5, -2, -4, -5, 0, 5, 6, 0, 0}; {-5, 1, 1, 6, -4, 4, -2, 3, 0, 0, 0, 0}; {-5, 0, -1, 3, 5, -2, 4, -4, 4, 2, 0, 0}; {6, 2, 4, -1, 4, 1, -2, 4, 6, -4, 0, 0}; {6, 1, 2, -4, 0, -3, 4, -4, -2, -1, 0, 0}; {-4, 3, 4, -2, 2, 0, -5, -2, -3, -1, 0, 0}; {6, 0, 0, 5, -4, 5, -1, 1, -1, 1, 0, 0}; {1, 4, 1, 3, 3, -3, 1, -2, -5, 5, 0, 0}; {4, 1, 4, 0, -4, 6, 0, 2, -5, -1, 0, 0}; {4, -1, 0, 6, 0, -2, -5, -3, -5, -1, 0, 0}; {6, 3, 6, 2, -2, 1, 5, -2, -2, -5, 0, 0}; {3, 0, 3, -1, -4, 6, -1, 0, 6, -2, 0, 0}; {-2, 5, 6, 0, -4, 3, -5, -5, -1, 1, 0, 0}; {-3, 4, 5, -1, -2, 4, -1, 4, -1, -1, 0, 0}; {-4, 0, -2, 1, -3, 1, -3, -3, 5, 6, 0, 0}; {4, 2, 6, 3, 6, 0, -3, -1, 3, 6, 0, 0}; {1, -5, -5, 0, 0, -5, 1, 5, 1, 0, 0, 0}; {-1, 4, 3, -5, 6, 0, 5, -4, 3, 2, 0, 0}; {-5, 2, 3, -3, -2, 3, -2, 6, -1, -1, 0, 0}; {0, 6, 6, 0, 0, 6, 1, 5, 1, 0, 0, 0}; {-2, 3, 2, -5, 6, -1, 5, -4, 3, 2, 0, 0}; {2, -3, -2, 5, 6, 1, -5, 4, -3, -2, 0, 0}; {0, 6, 6, 0, 0, 6, -1, -5, -1, 0, 0, 0}; {-1, 5, 5, -1, -1, 6, 0, 4, 0, -1, 0, 0}; {-5, -1, -3, 1, -1, 4, -3, -2, 5, 3, 0, 0}; {-4, 1, 0, 5, 4, -1, 3, -5, 2, 1, 0, 0}; {6, -1, -2, 3, 2, -2, 3, 5, 3, 1, 0, 0}; {5, -3, -5, -1, -3, 4, -4, -3, 6, 4, 0, 0}; {3, 6, 3, 6, 3, -2, 0, 0, -4, 6, 0, 0}; {-3, 6, -3, 6, -3, 2, 0, 0, 4, 6, 0, 0}; {-5, 3, 5, 1, 3, -4, 4, 3, 6, -4, 0, 0}; {6, 1, 2, -3, -2, 2, -3, -5, -3, -1, 0, 0}; {6, 1, 2, -3, -2, 3, -3, 6, -2, -2, 0, 0}; {4, -1, 0, -5, -4, 1, -3, 5, -2, -1, 0, 0}; {5, 1, 3, -1, 1, -4, 3, 2, -5, -3, 0, 0}; {3, -2, -1, 6, -5, 1, -4, 5, -3, -2, 0, 0}; {1, -5, -5, 1, 1, 6, 0, -4, 0, 1, 0, 0}; {0, 6, 6, 0, 1, 6, 0, -4, 0, 0, 0, 0}; {1, -4, -3, 4, 6, 0, -5, 4, -3, -2, 0, 0}; {-5, 1, 1, -5, -4, 4, -3, 2, -1, -1, 0, 0}; {-5, 1, 1, -5, -4, 4, -3, 2, -1, 0, 0, 0}; {6, -1, -2, 3, 3, -2, 3, 6, 2, 1, 0, 0}; {-5, 1, 1, -5, -4, 4, -2, 2, -1, -1, 0, 0}; {-5, 1, 1, -5, -4, 4, -2, 5, -1, 0, 0, 0}; {4, -3, -4, 1, 1, -4, 2, 5, 2, 1, 0, 0}; {5, -1, -1, 5, 6, 3, -3, 1, -1, -1, 0, 0}; {5, -1, -1, 5, 6, 3, -3, 1, -1, 0, 0, 0}; {-3, 3, 3, -3, -1, 4, -1, -5, -1, 0, 0, 0}; {-5, 2, 3, -2, 1, -3, 1, -3, -5, -2, 0, 0}; {6, 0, 0, 6, -4, 3, -3, 2, -1, -1, 0, 0}; {6, 1, 2, -3, 0, -3, 4, -3, -3, -2, 0, 0}; {4, -2, -2, 4, 6, 2, -4, 1, -2, -1, 0, 0}; {4, -2, -2, 4, 6, 2, -3, 1, -1, -1, 0, 0}; {4, -2, -2, 4, 6, 2, -3, 1, -1, 0, 0, 0}; {4, -1, 0, -5, -2, -5, 3, -4, -5, -3, 0, 0}; {3, -2, -1, 6, -3, -5, 3, -4, -5, -3, 0, 0}; {-4, -2, 6, -4, 6, 0, 4, 0, -3, 6, 0, 0}; {-3, 3, 3, -3, 0, 4, -1, -5, -1, -1, 0, 0}; {5, -2, -3, 2, 4, -3, 3, -5, 3, 1, 0, 0}; {5, 1, 3, -1, 4, 1, -2, 5, 6, -3, 0, 0}; {2, -3, -2, 5, -3, 6, 1, -5, -4, -3, 0, 0}; {2, -3, -2, 5, -3, 6, 2, -5, 6, -4, 0, 0}; {2, -3, -2, 5, -3, 6, 2, -5, -3, -3, 0, 0}; {3, -1, 1, -3, 2, 0, -3, 3, 6, -4, 0, 0}; {3, -2, -1, 6, -2, -4, 3, -4, -5, -2, 0, 0}; {1, -3, -1, -5, 1, -3, -4, 5, -5, -3, 0, 0}; {3, -2, -1, 6, 0, -4, -3, -5, -5, -3, 0, 0}; {3, 0, 3, 0, -4, -1, 4, -3, -3, -5, 0, 0}; {-3, 4, 5, 0, -5, 3, 6, 5, 5, -5, 0, 0}; {0, -4, -2, 6, 4, -2, 3, 5, -3, -4, 0, 0}; {-3, 2, 1, 6, 2, 4, -3, 4, 5, 2, 0, 0}; {1,-5,-5, 1, -2, 2, -5, 2, 1, 2, 0, 0}; {-3, 1, -1, 3, -2, 0, 3, -3, 6, 4, 0, 0}; {-2, 3, 2, -5, 3, 6, -2, 5, 3, 3, 0, 0}; {-2, 3, 2, -5, 3, 6, -2, 5, 6, 4, 0, 0}; {-2, 3, 2, -5, 3, 6, -1, 5, 4, 3, 0, 0}; {-2, 4, 4, -2, -5, -1, 5, 0, 1, 1, 0, 0}; {-3, 2, 1, 6, 2, 5, -2, 5, 3, 2, 0, 0}; {-5, -1, -3, 1, -4, -2, 2, -4, 6, 3, 0, 0}; {-3, 3, 3, -3, 6, -1, 4, -1, 0, 1, 0, 0}; {-5, 2, 3, -2, -4, 3, -3, 5, -3, -1, 0, 0}; {-3, 2, 1, 6, 3, 5, -3, 4, 5, 3, 0, 0}; {-3, 3, 3, -3, -5, -2, 4, 0, 1, 1, 0, 0}; {-3, 2, 1, 6, 3, 6, -2, 5, 3, 2, 0, 0}; {-4, 1, 0, 5, 2, 5, -3, 4, 5, 3, 0, 0}; {-4, 2, 2, -4, 6, -2, 3, -1, 1, 0, 0, 0}; {-4, 2, 2, -4, 6, -2, 3, -1, 1, 1, 0, 0}; {-4, 2, 2, -4, 6, -2, 4, -1, 1, 0, 0, 0}; {-4, 2, 2, -4, 6, -2, 4, -1, 2, 1, 0, 0}; {6, -1, -2, 3, 0, 3, -4, 3, 3, 2, 0, 0}; {-5, 1, 1, -5, 5, -2, 3, -2, 0, 0, 0, 0}; {6, 0, 0, 6, 4, -3, 3, -2, 1, 1, 0, 0}; {-5, 2, 3, -2, -3, 3, -2, 6, -2, -1, 0, 0}; {3, -3, -3, 3, 1, -4, 1, 5, 1, 0, 0, 0}; {-1, 4, 3, -4, 6, 0, 5, -4, 3, 2, 0, 0}; {-2, 6, -4, 4, 5, -2, 6, 4, -5, -3, 0, 0}; {-5, 1, 1, -5, 6, -3, 3, -1, 1, 1, 0, 0}; {-5, 1, 1, -5, 6, -3, 3, -1, 1, 0, 0, 0}; {-3, 5, -5, 3, 4, -3, 5, 4, -5, -3, 0, 0}; {-3, 5, -5, 3, 4, -3, 5, 4, -5, -4, 0, 0}; {-4, 3, 4, -1, -1, 4, -2, -5, -2, -1, 0, 0}; {5, -1, -1, 5, 4, -4, 2, -5, 1, 0, 0, 0}; {6, 0, 0, 6, 5, -3, 3, -1, 0, 0, 0, 0}; {5, -1, -1, 5, 4, -4, 2, -2, 1, 1, 0, 0}; {6, 1, 2, -3, -3, 2, -3, 6, -2, -1, 0, 0}; {5, -1, -1, 5, 4, -4, 3, -2, 1, 0, 0, 0}; {5, -1, -1, 5, 4, -4, 3, -2, 1, 1, 0, 0}; {6, 1, 2, -3, -3, 3, -3, 6, -3, -2, 0, 0}; {4, -2, -2, 4, 3, -4, 1, -3, 0, -1, 0, 0}; {4, -2, -2, 4, 3, -4, 1, -3, 0, 0, 0, 0}; {4, -4, 6, -1, -4, 3, -5, -3, 4, 3, 0, 0}; {6, -5, 2, 4, -2, 2, -2, 5, -2, -3, 0, 0}; {0, 3, 0, 4, 0, -4, -2, -1, -5, 6, 0, 0}; {2, -5, 6, 0, -2, 1, 6, 1, 3, 2, 0, 0}; {4, -1, 0, -4, -4, 1, -4, 5, -3, -2, 0, 0}; {1, 6, 5, -1, -3, 0, 5, 0, 2, 2, 0, 0}; {5, 1, 3, 0, 1, -5, 3, 2, 6, -4, 0, 0}; {3, -3, -3, 4, 3, -5, 1, -4, 0, 0, 0, 0}; {2, -4, -4, 3, 2, -5, 1, -4, 0, 0, 0, 0}; {2, -4, -4, 3, 2, -5, 1, -3, 0, 0, 0, 0}; {1, -4, -3, 5, 6, 0, -5, 4, -3, -2, 0, 0}; {-1, 5, 5, 0, 0, 5, -1, -5, -1, 0, 0, 0}; {5, -2, -3, 3, 2, -3, 2, 6, 1, 1, 0, 0}; {3, -4, -5, 1, 0, -4, 2, 5, 1, 1, 0, 0}; {6, -1, -2, 4, 4, -1, 2, -4, 1, -1, 0, 0}; {4, -2, -2, 5, 6, 2, -3, 2, -2, -1, 0, 0}; {-4, -2, 6, -3, 6, 0, 3, 1, -3, 6, 0, 0}; {3, -4, -5, 1, 2, -4, 1, -4, 1, 1, 0, 0}; {5, -5, 3, 6, 4, -1, 3, -1, -4, 6, 0, 0}; {3, 0, 3, 1, -4, 4, 4, 1, 5, -4, 0, 0}; {-4, 1, 0, 6, 0, 2, 5, 3, 5, 1, 0, 0}; {-3, 2, 1, -5, 2, 5, -2, 4, 2, 2, 0, 0}; {-3, 2, 1, -5, 2, 5, -1, 4, 3, 3, 0, 0}; {5, -2, -3, 3, -2, 1, -5, 3, 3, 0, 0, 0}; {-1, -4, -1, -3, -3, 3, -1, 2, 5, -5, 0, 0}; {4, -3, -4, 2, -2, 0, 5, 2, 3, 1, 0, 0}; {6, 0, 0, -5, 4, -5, 1, -1, 1, -1, 0, 0}; {6, 0, 0, -5, 4, -5, 2, -1, 0, -1, 0, 0}; {-3, 6, -3, -5, -5, 2, -2, 1, 5, -5, 0, 0}; {5, -3, -5, 0, -5, -3, 1, -5, 5, 3, 0, 0}; {6, -1, -2, 4, 0, 3, -4, 4, 2, 1, 0, 0}; {4, -3, -4, 2, -2, 1, -5, 3, 2, 1, 0, 0}; {3, -4, -5, 1, -3, 0, 6, 2, 2, -1, 0, 0}; {5, -2, -3, 3, -1, 2, -4, 3, 2, 1, 0, 0}; {6, 0, 0, -5, 4, -4, 3, -1, 0, 0, 0, 0}; {5, -1, -1, 6, 3, -5, 2, -2, 0, 0, 0, 0}; {5, 0, 1, -3, -5, 2, -4, 4, -4, -2, 0, 0}; {5, -1, -1, 6, 4, -4, 2, -3, 0, 0, 0, 0}; {3, 6, 3, -5, 2, 4, 5, 0, -5, 6, 0, 0}; {4, -3, -4, 2, -1, 3, -5, 3, 4, 3, 0, 0}; {3, -3, -3, 4, 2, -4, 1, -5, -1, -1, 0, 0}; {-1, 5, 5, 1, -1, 5, 0, 6, -1, 0, 0, 0}; {0, 3, 0, 5, 0, 3, 4, 0, 6, 6, 0, 0}; {-2, 0, -4, 0, 6, -4, -4, 3, -3, -5, 0, 0}; {-2, 1, -2, 3, -2, 3, 3, -2, 5, 4, 0, 0}; {1, -5, -5, 3, 1, 6, 1, -5, -1, 0, 0, 0}; {0, 6, 6, 2, 0, 5, 0, -5, -1, 0, 0, 0}; {2, 2, -4, -2, 6, 1, 6, 0, -1, -3, 0, 0}; {3, -1, 1, -1, -5, -1, 3, -5, -3, -4, 0, 0}; {-4, 1, 0, -5, 1, -1, 2, 6, 3, 4, 0, 0}; {4, -2, -2, 6, 1, 5, 1, 0, 1, -3, 0, 0}; {2, -5, 6, 1, -4, -1, 6, 2, 2, -1, 0, 0}; {-4, -3, 4, -4, 2, -1, 3, 0, -3, -4, 0, 0}; {6, 0, 0, -3, 2, 5, 1, 3, 2, -3, 0, 0}; {1, 4, 1, -5, -1, 4, 5, 1, -1, -4, 0, 0}; {0, 3, 0, 6, -2, 4, 5, 1, -1, -4, 0, 0}; {-5, 6, -1, 1, 1, -4, 1, 3, -2, 3, 0, 0}; {-2, 1, -2, 5, -3, 3, 4, 0, -2, -4, 0, 0}; {-5, -5, 1, 5, 6, 1, -5, -1, -5, 1, 0, 0}; {6, -5, 2, -4, -2, 5, 0, 5, 3, -2, 0, 0}; {5, 4, -2, 4, 3, -1, -5, -2, 4, -1, 0, 0}; {4, 3, -3, 3, -1, 3, -3, -1, -4, -4, 0, 0}; {4, 2, -5, 0, -5, 3, 5, -3, 0, 2, 0, 0}; {2, 1, -5, 2, 0, 5, -2, 4, -5, 1, 0, 0}; {1, 0, 6, 1, -1, 4, -2, 4, -5, 1, 0, 0}; {-3, -5, 0, 6, 3, -2, 1, 6, -2, 1, 0, 0}; {4, 5, 1, -2, -1, 4, -2, -4, 1, -3, 0, 0}; {3, 4, 0, -3, -2, 3, -2, -4, 2, -3, 0, 0}; {-2, -4, 1, -5, 5, -3, 1, -5, -3, 2, 0, 0}; {-4, 6, -1, 5, 3, -4, 0, 6, -3, 1, 0, 0}; {-4, 5, -3, 3, -1, 6, 6, -2, 0, 3, 0, 0}; {0, 0, -5, 4, 3, -4, 2, -1, 3, -2, 0, 0}; {-2, -4, 1, -4, 5, -3, 1, -5, -3, 2, 0, 0}; {-2, -2, 5, 2, 2, -5, 0, -2, 2, -3, 0, 0}; {1, -4, -2, 2, -2, -1, -3, 5, -4, -5, 0, 0}; {0,-3, 1, -5, -3, 5, -2, -4, 6, -4, 0, 0}; {-5, 2, 4, -3, 1, -3, 3, -1, -3, -2, 0, 0}; {5, -1, 0, 4, -5, 2, -4, 2, -1, -1, 0, 0}; {-4, 5, -3, 4, -2, 1, 1, 0, 4, 5, 0, 0}; {-1, 6, -4, 1, 6, 3, 0, -3, -3, -2, 0, 0}; {-4, 3, 5, -2, 3, 2, -1, -4, -3, -3, 0, 0}; {0, 0, -5, 5, 3, -4, 1, -1, 2, -3, 0, 0}; {-1, 5, 6, -2, 3, -2, 4, 0, -1, -2, 0, 0}; {-3, -3, 4, 2, 1, 6, 0, -2, 2, -3, 0, 0}; {6, 4, -3, 5, 2, 6, -2, 5, -5, 1, 0, 0}; {-5, 6, 0, -3, -5, 0, 5, 1, 5, -1, 0, 0}; {2, -2, 1, -5, 3, -3, -4, 0, 1, 4, 0, 0}; {-2, 5, -5, 0, -5, 3, -5, 6, 6, 6, 0, 0}; {4, 2, -5, 3, 1, 5, -2, 5, -5, 1, 0, 0}; {-1, 6, -4, 2, 3, -1, 3, -1, -4, -1, 0, 0}; {4, 0, 3, -2, 2, -1, -2, 2, -5, -5, 0, 0}; {3, -4, -4, 0, 1, -4, 1, 6, 2, 1, 0, 0}; {4, -2, -1, 4, 6, 2, -4, 3, -1, 0, 0, 0}; {3, -4, -4, 0, 1, -4, 2, -4, 2, 2, 0, 0}; {3, -3, -2, 3, 6, 1, -5, 2, -2, -1, 0, 0}; {2, -4, -3, 2, 5, 1, -5, 1, -2, -1, 0, 0}; {3, -1, 2, -3, 2, 0, -3, 4, 5, -4, 0, 0}; {2, -2, 1, -4, 1, -1, -3, 4, 4, -4, 0, 0}; {6, 4, -3, 6, 1, 6, -3, 4, 6, 0, 0, 0}; {1, -4, -2, 4, -3, 5, 1, -4, -5, -3, 0, 0}; {-1, 5, 6, -1, 3, -2, 5, -1, -2, -2, 0, 0}; {2, -2, 1, -4, 2, -1, -4, 4, 5, -4, 0, 0}; {-1, -5, -2, 5, -1, -4, -5, 5, -5, -4, 0, 0}; {1, -3, 0, -5, 1, -1, -5, 4, 5, -4, 0, 0}; {-1, 6, -4, 2, -5, 4, 0, -5, -5, -3, 0, 0}; {-3, 4, 6, 0, 5, 2, -1, -4, -3, -2, 0, 0}; {1, -4, -2, 4, -3, -4, 4, -5, -5, -2, 0, 0}; {4,-1, 1, -5, 0, -1, -4, -5, -4, -2, 0, 0}; {2,-4,-3,2, 6, 4, 0, -1, -2, 0, 0, 0}; {-5, 6, 0, -2, -5, 0, 4, 1, 4, -1, 0, 0}; {4, 2, -5, 4, 0, 5, -4, 3, 6, 0, 0, 0}; {0, -5, -3, 3, -3, 4, 0, -4, -4, -3, 0, 0}; {-3, 3, 4, -3, 2, -3, 3, -1, -2, -2, 0, 0}; {-3, 3, 4, -3, 2, -3, 4, -1, -1, -2, 0, 0}; {3, -2, 0, 6, 0, -3, -3, -5, -5, -3, 0, 0}; {1,-5,-4, 1, 6, 3, -1, 0, -2, 2, 0, 0}; {1, -5, -4, 1, 6, 4, 1, -2, -2, -2, 0, 0}; {-2, 3, 3, -5, -1, -4, 4, 1, 0, 1, 0, 0}; {-2, 5, -5, 1, -4, 4, -5, 6, 6, -5, 0, 0}; {-3, 4, 6, 0, -5, 3, -5, 6, 6, -5, 0, 0}; {-3, 4, 6, 0, -4, 4, 6, -5, -1, 1, 0, 0}; {-4,4,-5,2,-1,-3,2,2,-4,0,0,0}; {-5, -1, -2, 1, -3, -2, 2, -4, -5, 4, 0, 0}; {4, -2, -1, 4, 2, -3, 3, 6, 2, 0, 0, 0}; {-1, 5, 6, 0, -1, 5, -1, -5, -1, 0, 0, 0}; {-1, 5, 6, 0, -1, 5, 0, 4, 0, -1, 0, 0}; {1, -5, -4, 2, 1, -5, -1, -5, -1, -1, 0, 0}; {0, 6, -5, 1, 0, 6, -2, 6, -1, -1, 0, 0}; {0, 6, -5, 1, 0, 6, -1, -5, -1, -1, 0, 0}; {-2, 3, 3, -4, 6, 0, 4, -2, 2, 0, 0, 0}; {4, -4, -5, -1, -4, 3, -5, -3, 4, 2, 0, 0}; {-3, 6, -2, -5, -3, 3, -1, 1, 4, -5, 0, 0}; {-5, 4, -4, 5, -5, 1, -2, 0, 3, 6, 0, 0}; {2, -5, -5, 0, -2, 1, 6, 2, 1, 2, 0, 0}; {0, 5, 5, -2, -4, 0, 4, 0, 2, 2, 0, 0}; {-5, 0, 0, 5, 4, -2, 4, -5, 3, 1, 0, 0}; {-5, 1, 2, -4, -4, 4, -1, 2, 0, -1, 0, 0}; {4, -4, -5, -1, -3, 3, -4, -3, 5, 3, 0, 0}; {2, 6, 5, -3, -5, 2, 6, -4, 4, 3, 0, 0}; {2, 6, 5, -3, -5, 2, -5, -4, 4, 3, 0, 0}; {1, 6, 6, -1, -2, 0, 6, 2, 1, 2, 0, 0}; {3, -3, -2, 4, 5, 1, -4, 3, -2, 0, 0, 0}; {1, 6, 6, -1, -1, -5, 0, 4, 1, 0, 0, 0}; {0, 4, 3, -5, 6, 1, 5, -4, 4, 3, 0, 0}; {0, 4, 3, -5, 6, 1, 6, -5, 3, 3, 0, 0}; {0, 4, 3, -5, 6, 1, 6, -5, 4, 3, 0, 0}; {2, -4, -3, 3, 4, 1, -4, 1, -2, -1, 0, 0}; {0, 5, 5, -2, -2, 6, 0, 4, 0, 1, 0, 0}; {-2, 1, -1, 2, 0, 6, -1, -2, 6, 5, 0, 0}; {4, 0, 3, -1, 2, 6, 3, 2, 6, -5, 0, 0}; {5, -1, 0, 6, -4, 2, -2, 4, 0, 0, 0, 0}; {0, 5, 5, -2, -1, 6, 0, 6, 1, 1, 0, 0}; {1, -5, -4, 2, 4, 0, -4, 1, -2, 0, 0, 0}; {-1, 5, 6, 0, 2, -1, 6, 0, -3, -1, 0, 0}; {-1, 4, 4, -3, -2, 6, 0, 6, 1, 1, 0, 0}; {0, -4, -1, -5, 0, -2, -4, 3, 4, -4, 0, 0}; {0, -5, -3, 4, -4, 6, 2, -5, -5, -2, 0, 0}; {-2, 5, -5, 2, 6, 4, 0, 6, -5, -4, 0, 0}; {-2, 4, 5, -1, 2, -1, 6, -1, -3, -1, 0, 0}; {-1, -5, -2, 6, -1, -2, -4, 3, 3, -4, 0, 0}; {-4, 3, 5, 0, 4, 2, 0, 6, 5, -3, 0, 0}; {-3, 4, 6, 1, 6, 3, -1, 6, -5, -4, 0, 0}; {5, -2, -2, 3, -3, 6, -2, -5, -4, 2, 0, 0}; {6, 0, 1, -5, 3, -5, -1, -2, 2, -1, 0, 0}; {3, -5, 6, -2, 4, -5, 1, -5, 5, 2, 0, 0}; {0, 6, -5, 1, -2, -5, 0, 4, 1, 0, 0, 0}; {-5, 0, 0, 5, 1, 4, -2, 4, 3, 3, 0, 0}; {5, -2, -2, 3, -1, 3, -3, 3, 3, 2, 0, 0}; {-3, 2, 2, -5, 4, -1, 4, -5, 2, 1, 0, 0}; {3, -5, 6, -2, 6, -5, 0, 6, 6, 3, 0, 0}; {5, -3, -4, 0, -4, -2, 1, -4, 5, 4, 0, 0}; {4, -4, -5, -1, -5, -3, 1, -5, 5, 3, 0, 0}; {3, -5, 6, -2, 6, -4, 1, -5, 5, 4, 0, 0}; {4, -3, -3, 2, -1, 2, -4, 3, 2, 2, 0, 0}; {2, 6, 5, -3, 5, -5, 0, 6, 5, 3, 0, 0}; {4, -3, -3, 2, -1, 3, -5, 2, 1, 2, 0, 0}; {3, -5, 6, -2, 6, -3, 1, -5, 4, 3, 0, 0}; {2, 6, 5, -3, 5, -4, 0, 6, 4, 3, 0, 0}; {1, -5, -4, 2, 0, 6, 0, -4, 0, 1, 0, 0}; {-1, 5, 6, 1, -1, 5, -1, -5, -1, 0, 0, 0}; {0, 6, -5, 2, 0, 6, 0, -4, -1,0, 0, 0}; {-1, 5, 6, 1, -1, 5, -1, -5, -2, 0, 0, 0}; {4, -3, -3, 3, 0, -3, 2, 5, 2, 1, 0, 0}; {2, 6, 5, -2, 6, 3, -5, -5, 5, 2, 0, 0}; {2, 6, 5, -2, 6, -4, 0, -5, 4, 4, 0, 0}; {1, 6, 6, 0, -3, 0, 5, 1, 3, 2, 0, 0}; {2, -2, 1, -2, -2, 4, 0, 2, 5, -5, 0, 0}; {0, 4, 3, -4, 4, 6, -1, 5, 4, 3, 0, 0}; {2, -4, -3, 4, 2, 6, 1, -3, -1, 0, 0, 0}; {0, 5, 5, -1, -4, -1, 5, 1, 2, 0, 0, 0}; {-2, 3, 3, -3, 6, -2, 4, 0, 1, -1, 0, 0}; {2, 6, 5, -2, 6, -3, 0, -4, 4, 4, 0, 0}; {1, 6, 6, 0, -3, 1, 6, 1, 3, 2, 0, 0}; {-1, 2, 0, 4, -1, 1, 4, -2, -5, 5, 0, 0}; {-2, 4, 5, 0, -1, 4, -1, -5, -1, 0, 0, 0}; {-4, 1, 1, -5, 5, -2, 3, -2, 1, 1, 0, 0}; {-3, 3, 4, -1, -2, 4, -2, -5, -1, 0, 0, 0}; {-5, 0, 0, 6, 4, -2, 2, -4, 1, 0, 0, 0}; {5, -2, -2, 4, 2, -3, 2, 6, 1, 0, 0, 0}; {-1, 4, 4, -2, -4, -1, 5, -1, 2, 1, 0, 0}; {2, -2, 1, -2, -1, 5, 1, 2, 5, -4, 0, 0}; {1, 6, 6, 0, -1, -5, 0, 4, 0, 0, 0, 0}; {-3, 0, -2, 2, -1, 6, -3, -2, 6, 4, 0, 0}; {-3, 0, -2, 2, -1, 6, -2, -2, 6, 4, 0, 0}; {-1, 4, 4, -2, -3, 6, 0, 3, 0, 0, 0, 0}; {-3, 1, 0, 5, 3, -1, 4, -5, 2, 2, 0, 0}; {-5, -2, -4, 0, -3, 4, -3, -3, 5, 4, 0, 0}; {-3, 4, 6, 2, 4, -3, 5, 3, -5, -4, 0, 0}; {-5, 1, 2, -3, -2, 3, -2, 6, -2, -2, 0, 0}; {0, 5, 5, -1, -1, 6, -1, 4, 0, 0, 0, 0}; {-1, 4, 4, -2, -2, 5, 0, 5, 0, 1, 0, 0}; {6, -4, 5, -4, 5, -2, 3, 1, -4, 6, 0, 0}; {0, 5, 5, -1, 0, 6, 0, -5, 0, 0, 0, 0}; {-2, 5, -5, 3, 6, 4, 0, 6, 6, -3, 0, 0}; {-3, 5, -4, 5, -2, -3, -5, 2, 3, -4, 0, 0}; {6, 1, 3, -1, 3, 2, -1, 5, 4, -5, 0, 0}; {-4, 2, 3, -2, 3, -2, -1, -3, -5, -2, 0, 0}; {-2, 3, 3, -3, 4, 0, 4, -5, 3, 1, 0, 0}; {-1, 5, 6, 1, -3, 6, -1, 3, 0, 0, 0, 0}; {3, -5, 6, -1, 5, -4, 1, -5, 4, 2, 0, 0}; {2, -5, -5, 1, -4, 0, -5, 2, 2, 0, 0, 0}; {-4, 1, 1, -5, 3, -1, 3, -5, 2, 1, 0, 0}; {6, -2, -3, 2, -3, 4, -4, -3, 5, 3, 0, 0}; {-1, 4, 4, -2, 6, -3, 5, 1, 2, -2, 0, 0}; {5, -2, -2, 4, 0, 3, -4, 4, 1, 2, 0, 0}; {4, -3, -3, 3, -1, 2, -4, 3, 1, 1, 0, 0}; {5, -1, 0, -5, 4, -4, 3, -1, -1, 0, 0, 0}; {3, -4, -4, 2, -2, 1, -5, 2, 2, 1, 0, 0}; {4, -2, -1, 6, 3, -5, 2, -1, -1, -1, 0, 0}; {2, -5, -5, 1, -3, 0, 6, 2, 2, 0, 0, 0}; {2, -5, -5, 1, -3, 0, 6, 2, 2, 1, 0, 0}; {5, -2, -2, 4, 0, 3, -3, 3, 2, 3, 0, 0}; {1, 6, 6, 0, -4, 0, 6, 1, 2, 1, 0, 0}; {1, 6, 6, 0, -4, 0, 6, 2, 2, 0, 0, 0}; {2, -3, -1, -5, 5, -1, -5, 5, -4, -2, 0, 0}; {2, 6, 5, -1, 6, 2, 6, -4, 4, 3, 0, 0}; {1, 6, 6, 1, -3, -4, 1, 3, 2, 0, 0, 0}; {-5, -2, -4, 1, -5, 6, -1, -5, -5, 3, 0, 0}; {-5, -1, -2, 4, -1, 2, -4, 4, 3, 0, 0, 0}; {-2, 2, 1, -5, 4, 0, 4,

-5, 2, 1, 0, 0}; {6, -3, -5, 0, -4, 4, -4, -3, 5, 4, 0, 0}; {-5, -5, 2, 4, -3, 4, -4, 4, -2, -4, 0, 0}; {-3, -3, 4, 6, 0, 3, -1, 6, -1, -3, 0, 0}; {-4, -4, 3, 5, -1, 2, -1, 6, -1, -3, 0, 0}; {4, 6, 3, -5, 3, -2, 0, 0, -4, 6, 0, 0}; {5, 5, 0, 2, -4, 3, -5, 3, -1, -3, 0, 0}; {-2, 3, 3, -2, -2, 4, -2, 6, -1, 1, 0, 0}; {6, 3, -5, 6, 3, -5, -1, 5, 6, 6, 0, 0}; {-2, 2, 1, -5, 0, -4, -1, -4, -4, 3, 0, 0}; {6, -2, -3, 3, -3, 5, -4, -4, 6, 4, 0, 0}; {4, -4, -5, 1, -5, 4, -5, -4, 6, 4, 0, 0}; {-1, 4, 4, -1, 6, -3, 4, 1, 2, -1, 0, 0}; {1, -5, -4, 4, 0, 5, 1, -3, -1, 0, 0, 0}; {-1, 3, 2, -3, 3, 0, 4, -5, 4, 4, 0, 0}; {-3,-1,-4, 1, -2, 0, -5, 3, 3, -5, 0, 0}; {-5, -1, -2, 6, 0, -2, 2, 6, 3, 4, 0, 0}; {-5, 6, 1, 4, 6, 0, 5, -2, -5, 0, 0, 0}; {-1, -1, -5, -1, 6, -5, 1, -3, 6, -3, 0, 0}; {3, 0, 5, 6, 2, -5, -1, 4, 3, -2, 0, 0}; {-4, 5, -2, 1, -1, 3, 5, -1, 2, 3, 0, 0}; {2, 1, -4, 1, 3, -3, 3, -5, 5, -1, 0, 0}; {-1, -5, -1, 2, -3, -2, -4, 5, -4, -5, 0, 0}; {-1, -3, 3, -4, 5, -1, 2, -4, -1, 2, 0, 0}; {-3, 5, -3, 0, -4, -3, -5, 4, -5, -5, 0, 0}; {0, -1, 6, 0, -1, 4, -3, 4, -4, 1, 0, 0}; {-1, -2, 5, -1, -2, 3, -4, 3, -5, 0, 0, 0}; {-4, 6, 0, 5, 4, -4, 0, -5, -2, 2, 0, 0}; {3, 0, 5, -2, 4, 5, 4, 3, 6, 6, 0, 0}; {-4, 4, -4, 0, -5, -4, 6, 4, -5, -5, 0, 0}; {6, 2, 6, -2, 6, -5, 5, 3, 6, -5, 0, 0}; {-3, -4, 3, -2, -3, 2, -5, 2, 6, 0, 0, 0}; {-5, 5, -1, 5, 3, -5, 0, 6, -3, 1, 0, 0}; {1, 6, -5, -4, 2, -1, 2, 0, -1, 4, 0, 0}; {-5, 6, 1, -4, -4, 0, 5, 1, 6, -1, 0, 0}; {5, 3, -3, 3, 2, 6, -2, 5, -4, 1, 0, 0}; {4, 4, 0, -4, -2, 4, -2, 2, 1, -4, 0, 0}; {-1, -4, 1, -5, 1, 3, 2, 1, 5, 6, 0, 0}; {-5, 3, -5, 0, -5, 6, 6, 4, 6, -5, 0, 0}; {6, 2, 6, -1, 6, 6, 5, 4, 6, -5, 0, 0}; {5, 1, 5, -2, 5, 6, 5, 3, 6, -5, 0, 0}; {4, 2, -4, 3, 1, 6, -2, 5, -4, 1, 0, 0}; {3, 1, -5, 2, 0, 5, -3, 4, -5, 0, 0, 0}; {2, -3, 0, 4, -1, -1, -3, 6, -4, -4, 0, 0}; {-5, 6, 1, -3, -4, 0, 5, 1, 5, -1, 0, 0}; {5, 4, -1, -5, 6, -1, 4, 0, 4, -2, 0, 0}; {5, 4, -1, -5, 6, -1, 4, 1, 5, -1, 0, 0}; {2, 0, 6, 1, 0, 4, -3, 4, -5, 0, 0, 0}; {-5, -5, 3, 0, 1, 6, -1, -3, 1, -3, 0, 0}; {6, 6, 2, -1, 0, 5, -1, -3, 2, -3, 0, 0}; {3, 1, -5, 2, 1, 4, -3, 4, -5, 0, 0, 0}; {6, 3, -4, 3, -4, 5, 6, -2, 4, 5, 0, 0}; {6, 3, -4, 3, -4, 6, 6, -2, 4, 5, 0, 0}; {3, -1, 3, -3, 1, -2, -2, 0, -5, 6, 0, 0}; {1, -3, 1, -5, 0, -3, -3, 0, 6, 6, 0, 0}; {-4, 4, -4, 2, -5, -4, 6, 4, -5, -5, 0, 0}; {-4, 5, -2, 5, -1, 1, 1, 0, 4, 5, 0, 0}; {5, 1, 5, -1, 4, 6, 5, 3, 6, 6, 0, 0}; {6, 2, 6, 0, 5, -5, 5, 3, -5, -5, 0, 0}; {0, -4, 0, 6, 0, -3, -4, 1, 3, 5, 0, 0}; {-1, -5, -1, 5, -1, -3, -5, 5, -5, -4, 0, 0}; {-2, 6, -2, 4, -2, -4, 6, 4, 6, -4, 0, 0}; {-5, 2, 5, -2, 3, 1, -2, -4, -3, -3, 0, 0}; {4, 1, 6, 1, -4, -2, 0, -1, 3, 4, 0, 0}; {2, -2, 2, -4, 2, 4, 3, 2, 5, 6, 0, 0}; {-5, 1, 3, -5, 0, -5, 2, -1, -2, -2, 0, 0}; {-5, 2, 5, -2, 4, 1, -3, -5, -5, -3, 0, 0}; {4, -1, 2, -5, 1, -1, -3, -5, -4, -4, 0, 0}; {2, 1, -4, 5, 4, -3, 2, -1, 3, -2, 0, 0}; {1, -1, 5, 1, -1, 3, -4, 3, 6, 0, 0, 0}; {1, -2, 3, -2, -5, 2, 3, -4, -2, 1, 0, 0}; {6, 0, 2, 6, 0, -5, 2, -2, -2, -3, 0, 0}; {5, -1, 1, 5, -1, 6, 1, -2, -3, -3, 0, 0}; {-2, -4, 2, -2, -3, 1, 6, 2, 5, -1, 0, 0}; {6, 2, 6, 0, -2, -4, 1, 1, -5, -1, 0, 0}; {-3, 3, 5, -3, 5, 2, -5, 6, -4, 2, 0, 0}; {-2, 6, -2, 4, 4, -5, 0, -1, -3, 2, 0, 0}; {-4, 5, -2, 5, 6, 3, -4, -5, 5, -5, 0, 0}; {-3, 6, -1, 6, -4, 3, -4, -5, 6, -5, 0, 0}; {3, -1, 3, -2, -1, 6, -1, -3, -5, -4, 0, 0}; {-2, -3, 4, 2, -5, -3, 3, -3, 2, -1, 0, 0}; {4, 1, 6, 2, -5, 4, 6, -2, 4, 5, 0, 0}; {3, 0, 5, 1, 6, 4, 5, -2, 3, 5, 0, 0}; {1, 6, -5, -1, 0, -5, 1, -5, 2, 1, 0, 0}; {-2, 5, -4, 2, 5, 2, 1, 3, -4, -5, 0, 0}; {3, -1, 3, -2, 2, 5, 3, 2, 6, -5, 0, 0}; {2, -1, 4, 0, 6, -3, -1, -2, 3, 3, 0, 0}; {1, -3, 1, -4, 1, 4, 3, 1, 5, 5, 0, 0}; {-3, 3, 5, -2, 2, -2, 4, -1, -3, -1, 0, 0}; {-3, 3, 5, -2, 2, -2, 5, -2, -3, -1, 0, 0}; {-3, 4, -5, 1, 6, 3, -1, -5, 6, -3, 0, 0}; {-5, 2, 5, -1, 4, 1, -2, -4, -4, -3, 0, 0}; {1, -5, -3, 2, 6, 4, 1, -2, -3, -1, 0, 0}; {0, -5, -2, 4, -3, -3, -5, 5, -5, -4, 0, 0}; {-1, -5, -1, 6, 0, 2, 3, 1, 5, 5, 0, 0}; {-3, 4, -5, 1, -5, -4, -5, 4, -5, -5, 0, 0}; {1, -1, 5, 2, -1, 3, -5, 3, 5, -1, 0, 0}; {1, -1, 5, 2, -1, 3, -5, 3, 6, 0, 0, 0}; {-1, -3, 3, 0, -3, 2, 6, 2, 5, -1, 0, 0}; {5, -1, 1, 6, -1, -5, 2, -3, -3, -2, 0, 0}; {6, 1, 4, -2, 4, 1, -3, 6, -5, -4, 0, 0}; {4, -2, 0, 5, -2, 6, 1, -3, -3, -3, 0, 0}; {5, 0, 3, -3, 3, 0, -3, 6, -5, -3, 0, 0}; {1, -4, -1, 5, -1, -3, -4, 6, -5, -4, 0, 0}; {-1, 5, -5, 0, 5, 3, 0, -3, -3, -2, 0, 0}; {-4, 2, 4, -3, 2, 1, -2, -4, -3, -2, 0, 0}; {-2, 5, -4, 2, -4, -4, -5, 5, -5, -5, 0, 0}; {0, 4, 4, -5, 1, -4, 5, 4, 0, 3, 0, 0}; {5, -1, 1, 6, 2, 0, 5, 4, 6, 1, 0, 0}; {-5, -1, -1, 2, -2, -4, 1, -5, -3, 4, 0, 0}; {2, -5, -4, 1,-2, 1, -5, 3, 1, 2, 0, 0}; {-1, 3, 3, -5, 3, 6, 0, 6, 4, 3, 0, 0}; {-5, 1, 3, -3, -4, 3, -4, 4, -2, -1, 0, 0}; {6, 0, 2, -4, -5, 2, -4, 5, -2, 0, 0, 0}; {2, 6, 6, -2, -5, 2, -5, -4, 4, 2, 0, 0}; {-1, 0, -3, -2, 4, -2, 4, 1, -5, -4, 0, 0}; {-2, 2, 2, 6, 3, 5, -2, 5, 3, 3, 0, 0}; {-2, -3, 4, 3, -4, -2, 4, -2, 2, -1, 0, 0}; {-1, 3, 3, -5, 5, 0, 5, -5, 3, 2, 0, 0}; {5, 3, -3, -5, 0, 1, -5, 0, 4, 0, 0, 0}; {0, 6, -4, 2, 3, 0, -5, 3, -2, -1, 0, 0}; {-2, -2, 6, 6, 1, 6, -2, 5, -1, -3, 0, 0}; {-2, 6, -2, 6, -2, 2, 1, 0, 4, 5, 0, 0}; {-2, 3, 4, -3, -2, 5, 0, 6, 1, 1, 0, 0}; {-4, 1, 2, -5, -4, 4, -1, 5, 0, 1, 0, 0}; {1, -2, 3, 0, 5, -3, 0, 6, -5, 1, 0, 0}; f-2, 6, -2, 6, -1, 2, 2, 0, 4, 5, 0, 0}; {-5, 3, -5, 3, -4, -5, -5, 0, 2, 5, 0, 0}; {-4, 2, 4, -2, 1, -2, 5, -2, -3, 0, 0, 0}; {6, -1, 0, 5, -5, 3, -3, 2, -1, 0, 0, 0}; {0, -3, 2, -1, 6, -3, -1, 6, -4, 1, 0, 0}; {-2, -5, 0, -3, 4, -4, -2, 5, -5, 0, 0, 0}; {-3, 6, -1, -4, 3, -5, -2, 5, -5, 0, 0, 0}; {6, 0, 2, -4, 0, -4, 2, -2, -4, -2, 0, 0}; {5, 0, 3, -2, 3, 1, -2, 5, 5, -4, 0, 0}; {-4, 4, -4, 4, -1, 1, 4, -3, -2, 2, 0, 0}; {-4, 5, -2, -5, 3, 6, -2, 5, -5, 0, 0, 0}; {-5, 4, -3, 6, 2, 6, -3, 5, -5, 1, 0, 0}; {3, -3, -1, 5, -2, 6, 1, -3, -4, -3, 0, 0}; {3, -2, 1, -4, 2, -1, -4, 5, 6, -4, 0, 0}; {-5, 1, 3, -3, 2, 0, -2, -4, -4, -2, 0, 0}; {-5, 4, -3, 6, 3, -2, 0, 5, -5, 0, 0, 0}; {2, -4, -2, 4, -2, 5, 0, -3, -4, -3, 0, 0}; {1, 6, -5, 0, 6, 4, -4, 6, -5, 2, 0, 0}; {3, -1, 3, -1, -4, 6, -1, 0, -5, -2, 0, 0}; {-2, 2, 2, 6, 0, -3, 1, -3, -2, 4, 0, 0}; {-5, -1, -1, 3, -2, -5, -1, -4, -4, 3, 0, 0}; {-3, 1, 1, 6, 1, 5, -2, 5, 3, 2, 0, 0}; {-5, -1, -1, 4, -1, 3, -3, 4, 3, 1, 0, 0}; {3, -5, -5, 0, -5, 4, -4, -5, 6, 3, 0, 0}; {-3, 3, 5, 0, -3, 1, -4, -4, -2, -4, 0, 0}; {-1, 5, -5, 2, -1, 4, -1, -3, -3, -2, 0, 0}; {-3, 1, 1, 6, 1, 4, -2, 5, 4, 1, 0, 0}; {6, -3, -4, 0, 6, -4, 2, -4, 6, 2, 0, 0}; {-4, 0, 0, 5, 1, 4, -3, 4, 2, 2, 0, 0}; {-4, 0, 0, 5, 1, 4, -3, 4, 3, 2, 0, 0}; {-3, 2, 3, -3, 6, -2, 5, 0, 1, 1, 0, 0}; {-3, 1, 1, 6, 2, 5, -1, 5, 3, 2, 0, 0}; {6, -3, -4, 0, -5, -3, 2, -4, 5, 3, 0, 0}; {4, -3, -2, 4, 1, -4, 2, 5, 1, 0, 0, 0}; {0, 4, 4, -3, 5, 1, 6, -5, 4, 2, 0, 0}; {-1, 4, 5, -1, -4, -1, 5, 2, 0, 1, 0, 0}; {-2, 2, 2, -5, 3, 5, -1, 5, 3, 3, 0, 0}; {0, -4, 0, -3, -2, 4, 0, 2, 4, -5, 0, 0}; {0, -4, 0, -3, -2, 4, -2, -4, 6, -5, 0, 0}; {5, -3, -3, 2, -1, 2, -5, 2, 3, 2, 0, 0}; {4, -3, -2, 4, 2, -4, 1, -3, 1, 1, 0, 0}; {-1, -1, -5, -4, 1, 4, 0, 5, -1, -4, 0, 0}; {-3, 1, 1, 6, 3, -1, 4, 6, 2, 1, 0, 0}; {-5, -2, -3, 1, -3, 4, -3, -3, 5, 3, 0, 0}; {4,-5,6,-2,6, 1, -5, -4, 3, 3, 0, 0}; {2, -5, -4, 2, 1, 6, 0, -4, 0, 1, 0, 0}; {2, 4, 2, 5, 1, -5, 0, -1, 6, 5, 0, 0}; {-5, -5, 3, 4, -2, 3, -3, 4, -2, -3, 0, 0}; {3, 5, 3, 6, 2, -3, 1, -1, -5, 5, 0, 0}; {-5, -5, 3, 4, -1, 3, -3, 4, -2, -4, 0, 0}; {4, 4, 0, 1, -4, 1, -4, 3, -3, -3, 0, 0}; {-5, 0, 1, -5, -4, 3, -3, 5, -1, 0, 0, 0}; {-4, 1, 2, -4, -3, 4, -1, 6, 0, 0, 0, 0}; {-5, 0, 1, -5, -4, 4, -2, 6, 0, 0, 0, 0}; {5, 0, 3, -1, 3, 1, -2, 5, 5, -2, 0, 0}; {3, -3, -1, 6, -3, 6, 2, -4, -5, -1, 0, 0}; {3, -2, 1, -3, 1, 0, -2, 3, 4, 6, 0, 0}; {3, -1, 3, 0, 5, 5, 5, -1, 1, 5, 0, 0}; {-2, 6, -2, -5, 1, 2, 3, -3, -1, 3, 0, 0}; {1, -4, -1, -5, 1, -3, -4, 5, -5, -4, 0, 0}; {-5, 0, 1, -5, 2, -1, 3, 6, 3, 1, 0, 0}; {-2, 3, 4, -2, 5, 2, 6, 5, 6, 2, 0, 0}; {-4, 1, 2, -4, 3, 0, 4, 6, 3, 1, 0, 0}; {-5, -1, -1, 4, -2, -5, -2, -4, -4, 4, 0, 0}; {4, -2, 0, -5, 3, 5, -2, -1, 0, -2, 0, 0}; {-3, 1, 1, 6, 0, 4, -1, 5, 4, 2, 0, 0}; {5, -3, -3, 3, -3, 1, -4, 3, 3, 0, 0, 0}; {5, -2, -1, 6, 1, -2, 2, 5, 2, 0, 0, 0}; {6, 0, 2, -2, 6, 4, -3, 1, 0, -1, 0, 0}; {4, -3, -2, 5, 0, -3, 1, 5, 2, 0, 0, 0}; {5, -4, -5, 0, 5, 0, 2, -1, -2, 6, 0, 0}; {3, -5, -5, 1, -5, 4, -5, -5, 6, 3, 0, 0}; {6, 0, 2, -2, 6, 5, -2, 0, 1, -1, 0, 0}; {5, -3, -3, 3, -3, 6, -3, -5, -5, 4, 0, 0}; {1, 4, 3, -4, 1, -3, 0, -2, -4, 4, 0, 0}; {1, 5, 5, -1, 5, 2, 6, -4, 4, 1, 0, 0}; {4, -4, -4, 2, -4, 5, -3, 6, -5, 2, 0, 0}; {1, 5, 5, -1, 5, 3, 6, -5, 5, 2, 0, 0}; {5, -3, -3, 3, -3, 0, -5, 3, 3, 0, 0, 0}; {5, -1, 1, -3, 6, 0, -4, 6, -2, 0, 0, 0}; {2, -5, -4, 3, -1, -4, 1, 4, 2, 0, 0, 0}; {-4, 1, 2, -3, 5, -4, 3, 0, 0, -1, 0, 0}; {-1, 4, 5, 0, -3, 6, -1, 3, 0, 0, 0, 0}; {-2, 2, 2, -4, 4, 0, 5, -5, 3, 1, 0, 0}; {-1, -5, -1, -3, -2, 3, -3, -4, 5, -5, 0, 0}; {2, -4, -2, 6, 5, 0, -5, 4, -3, -1, 0, 0}; {5, 5, 1, 3, -3, 1, -3, 2, -3, -5, 0, 0}; {5, 5, 1, 3, -3, 2, -4, 4, -3, -4, 0, 0}; {5, 5, 1, 3, -3, 2, -4, 4, -2, -3, 0, 0}; {4, -2, 0, -4, 2, 6, -3, -2, 2, 0, 0, 0}; {6, -1, 0, -5, 1, -1, 3, 6, 3, 0, 0, 0}; {5, -4, -5, 0, 4, 0, 2, -1, -2, 5, 0, 0}; {-1, 6, -3, 6, 2, -4, -5, 4, -4, -1, 0, 0}; {6, -2, -2, 5, -2, 6, -3, -5, -5, 5, 0, 0}; {3, 6, 5, -1, 4, -1, 1, -2, -3, 6, 0, 0}; {2, 5, 4, -2, 3, -2, 0, -2, -3, 6, 0, 0}; {2, -5, -4, 4, -1, -4, 1, 5, 1, 0, 0, 0}; {-1, 4, 5, 1, -4, -5, 0, 3, 1, -1, 0, 0}; {1, -5, -3, 6, 3, 1, -5, 0, -2, -2, 0, 0}; {-3, 1, 1, -4, 3, -1, 4, -5, 2, 1, 0, 0}; {-2, 3, 4, 0, -2, 5, -2, 4, -1, -1, 0, 0}; {3, 4, 1, 5, 0, -4, 0, -1, -5, -5, 0, 0}; {1, 1, -3, 0, 6, 1, 5, 2, -3, -4, 0, 0}; {3, -5, -4, 3, -4, 4, -5, 6, -5, 4, 0, 0}; {1, 6, -4, 4, -1, -4, 0, 3, 2, 0, 0, 0}; {-1, 2, 2, -4, 1, -4, -1, -3, -4, 5, 0, 0}; {-4, -2, -3, 2, 6, 1, 3, 0, -2, 5, 0, 0}; {-2, 3, 5, 1, -4, 6, -1, 3, 1, -1, 0, 0}; {-3, 1, 2, -3, 3, 0, 4, -5, 4, 1, 0, 0}; {-4, -1, -1, 5, -2, 6, 1, -5, -4, 3, 0, 0}; {-3, 2, 4, 0, -5, 6, -1, 2, 1, -1, 0, 0}; {-3, 2, 4, 0, -5, 6, -1, 3, 1, -1, 0, 0}; {-4, 1, 3, -1, 6, 5, -1, 2, 0, -2, 0, 0}; {-4, 0, 1, -4, 3, -1, 3, 6, 3, 1, 0, 0}; {6, -2, -1, 6, 1, -3, 3, 6, 1, 0, 0, 0}; {6, -2, -1, 6, 1, -2, 3, 6, 3, 1, 0, 0}; {6, -2, -1, 6, 2, -2, 2, 6, 2, 0, 0, 0}; {5, -3, -2, 5, 1, -3, 2, 6, 1, 0, 0, 0}; {-4, 2, 5, 2, 2, -4, 2, -1, -5, -3, 0, 0}; {-1, -5, 0, -1, 2, -4, 1, 4, 6, 3, 0, 0}; {3, 0, 6, -5, 3, -5, 0, 4, 3, -2, 0, 0}; {5, -1, 2, 2, -3, -5, -1, -2, -1, 3, 0, 0}; {-1, -1, -4, 2, 4, -4, 2, -1, 5, -1, 0, 0}; {6, 4, -1, 4, 0, 4, -3, -1, -4, -4, 0, 0}; {-4, 6, 1, 6, 4, -3, 1, -5, -2, 2, 0, 0}; {-5, 5, 0, 5, 3, -4, 0, 6, -3, 1, 0, 0}; {-5, 5, 0, 5, 3, -4, 0, -5, -2, 2, 0, 0}; {-5, 5, 0, 5, 3, -4, 1, -5, -2, 2, 0, 0}; {5, 2, -4, 0, -2, 1, 5, -2, 0, 3, 0, 0}; {6, 4, -1, 4, 3, -5, 0, 6, -3, 1, 0, 0}; {0, -2, 5, -1, 5, 3, 1, 1, -5, -2, 0, 0}; {-4, 5, -1, 4, -2, 0, 2, 1, 4, 4, 0, 0}; {-4, 5, -1, 4, -1, 1, 1, 1, 4, 5, 0, 0}; {6, 3, -3, 2, -2, -4, 1, 3, -3, 0, 0, 0}; {4, 0, 5, -3, 4, 2, 6, -5, 0, 1, 0, 0}; {4, 0, 5, -3, 4, 5, 5, 3, 6, 6, 0, 0}; {3, -1, 4, -4, 4, 5, 5, 2, 6, 6, 0, 0}; {3, 1, -4, 2, 1, 5, -2, 4, -4, 1, 0, 0}; {2, 0, -5, 1, 0, 5, -3, 4, -4, 0, 0, 0}; {3, -1, 4, -4, 5, 1, 4, 6, -1, 1, 0, 0}; {-5, -5, 4, 0, 1, 5, -1, -3, 1, -4, 0, 0}; {0, -3, 3, -4, -2, 5, -2, -4, -5, -4, 0, 0}; {-4, 5, -1, 5, -1, 0, 1, 0, 4, 5, 0, 0}; {-5, 4, -2, 4, -2, 0, 1, 0, 4, 5, 0, 0}; {-4, 5, -1, 5, -1, 1, 1, 1, 4, 5, 0, 0}; {5, 1, 6, -1, 5, 6, 5, 3, -5, -5, 0, 0}; {4, 0, 5, -2, 4, 5, 4, 3, 6, 6, 0, 0}; {3, 0, 6, 0, -5, -3, 0, 0, 2, 4, 0, 0}; {3, -1, 4, -3, 3, 5, 5, 3, 6, 6, 0, 0}; {3, 0, 6, 0, -5, -2, -1, -1, 3, 4, 0, 0}; {3, 0, 6, 0, -5, -2, 0, -1, 3, 4, 0, 0}; {2, -1, 5, -1, 6, -3, -1, -1, 3, 4, 0, 0}; {2, -1, 5, -1, -5, -5, 0, 2, -4, -1, 0, 0}; {3, -1, 4, -3, 4, 5, 4, 3, 6, 6, 0, 0}; {1, -4, 0, 4, -2, -2, -4, 6, -4, -4, 0, 0}; {1, -3, 2, -5, 2, 3, 3, 2, 5, 6, 0, 0}; {5, 3, -2, 5, 2, 5, -4, 4, 6, 0, 0, 0}; {0, -4, 1, 6, 1, 3, 3, 1, 5, 5, 0, 0}; {-3, 4, -4, 0, -5, -4, -5, 4, -4, -5, 0, 0}; {-1, -5, 0, 5, 1, 3, 4, 1, 5, 5, 0, 0}; {1, -3, 2, -5, 3, 1, 4, 6, -1, 1, 0, 0}; {1, -3, 2, -5, 3, 3, 4, 2, 5, 6, 0, 0}; {-3, 5, -2, 3, 0, 2, 2, 0, 4, 5, 0, 0}; {-1, -3, 4, -1, -2, 2, -5, 2, 6, -1, 0, 0}; {-2, 5, -3, 1, -3, -4, -5, 5, -5, -4, 0, 0}; {-2, -4, 3, -2, -2, 1, 6, 2, 5, -1, 0, 0}; {-1, -2, 6, 2, 3, -5, 1, -2, 2, -3, 0, 0}; {-3, -5, 2, -3, -3, 1, 6, 2, 5, -1, 0, 0}; {-2, 0, -1, -2, 3, -4, 3, -1, 5, 6, 0, 0}; {1, 1, -2, -5, -2, 2, -4, -5, 0,-4, 0, 0}; {-4, 5, -1, 5, 6, 0, 5, -5, -5, 1, 0, 0}; {-4, 5, -1, 6, -4, 0, 5, -5, -5, 1, 0, 0}; {3, -1, 4, -2, 1, -2, -1, 0, 6, 6, 0, 0}; {4, 1, -5, 2, -5, 4, 6, -2, 3, 4, 0, 0}; {2, -2, 3, -3, 1, -2, -2, 1, 4, 5, 0, 0}; {0, -4, 1, -5, -1, -4, -3, -1, 5, 5, 0, 0}; {-2, 6, -1, 5, -2, -4, -4, -1, 6, 6, 0, 0}; {5, 1, 6, 0, 5, 5, 4, 3, 6, -5, 0, 0}; {4, 0, 5, -1, 4, 5, 4, 3, 6, 6, 0, 0}; {2, -2, 3, -3, 2, 4, 3, 2, 5, 6, 0, 0}; {3, 0, 6, 1, -5, -2, 0, -1, 3, 4, 0, 0}; {2, -4, -1, 3, -5, 4, 2, -1, -3, -1, 0, 0}; {0, -4, 1, -5, 1, 1, 5, 6, 0, 1, 0, 0}; {1, -4, 0, 5, -2, -2, -4, 6, -4, -4, 0, 0}; {3, 0, 6, 1, -4, -2, -1, -1, 3, 4, 0, 0}; {-1, -4, 2, -3, 4, 6, -2, -1, 1, 3, 0, 0}; {1, -3, 2, -4, 2, 4, 3, 2, 6, 6, 0, 0}; {1, -3, 2, -4, 2, 4, 4, 2, 5, 6, 0, 0}; {0, -4, 1, -5, 1, 3, 3, 1, 5, 5, 0, 0}; {0, -3, 3, -2, 5, -4, -2, -3, 2, 3, 0, 0}; {-2, 6, -1, 5, 0, 2, 2, 1, 5, 5, 0, 0}; {-4, 3, -5, 0, 6, -5, 6, 4, -5, -5, 0, 0}; {-2, 6, -1, 5, 0, 2, 3, 1, 5, 5, 0, 0}; {-1, -3, 4, 0, -3, -2, 6, 2, 5, -1, 0, 0}; {2, -3, 1, 6, 0, -2, -4, 6, -5, -4, 0, 0}; {-3, 4, -4, 1, -4, -4, 6, 5, -5, -4, 0, 0}; {-4, 3, -5, 0, -5, -5, 6, 4, 6, -5, 0, 0}; {-2, -5, 1, -4, 5, -4, -1, 6, -4, 1, 0, 0}; {-1, -3, 4, 0, -2, 2, 6, 2, 5, -1, 0, 0}; {-2, -4, 3, -1, -3, 1, 6, 2, 5, -1, 0, 0}; {-5, 3, -4, 2, -2, 1, 1, 0, 4, 5, 0, 0}; {-3, 6, 0, -5, 4, -4, -1, 6, -4, 1, 0, 0}; {-2, -4, 3, -1, -3, 2, 6, 2, 5, -1, 0, 0}; {4, -2, 1, 5, -1, 6, 1, -3, -4, -3, 0, 0}; {0, -5, -1, 4, -1, -4, -5, 5, 6, -4, 0, 0}; {4, -1, 3, -4, 3, 0, 6, 5, 6, 6, 0, 0}; {4, -1, 3, -4, 3, 0, -5, 5, 6, -5, 0, 0}; {1, -5, -2, 2, -4, 4, 0, -3, -3, 0, 0, 0}; {-5, 3, -4, 2, -2, -2, 1, 1, 3, 5, 0, 0}; {5, -2, 0, 3, -3, 6, 3, 0, -1, -1, 0, 0}; {5, -1, 2, 6, 1, 0, -2, -5, -3, -3, 0, 0}; {6, 1, 5, -2, 6, 6, 5, 4, 6, -5, 0, 0}; {4, -1, 3, -4, 4, 6, 5, 2, 6, 6, 0, 0}; {-3, -5, 2, -2, -3, 2, 6, 2, 5, -1, 0, 0}; {-2, 1, 1, 2, -5, 2, -2, -5, 2, 4, 0, 0}; {-4, -1, -1, 0, 5, 1, -3, 6, 2, 4, 0, 0}; {3, 0, 6, 1, 1, 4, -4, 4, 6, 0, 0, 0}; {5, -5, 6, 6, 0, 6, 1, -2, 4, 6, 0, 0}; {-3, 6, 0, -5, -4, 1, 6, -5, -4, 1, 0, 0}; {5, 3, -2, -5, -2, 3, -2, 2, 3, -1, 0, 0}; {2, -1, 5, 1, 3, -4, 2, 5, 6, 0, 0, 0}; {0, -4, 1, -4, -1, -3, -3, 0, 5, 6, 0, 0}; {-2, 6, -1, 6, -2, -5, -4, -1, 5, 5, 0, 0}; {-2, 6, -1, 6, -2, -4, -4, -1, 5, 5, 0, 0}; {-2, 6, -1, 6, -2, -4, -4, 0, 3, 5, 0, 0}; {-4, 4, -3, 4, -4, -5, -5, -2, 5, 5, 0, 0}; {-1, -5, 0, -5, 0, 2, 2, 1, 5, 5, 0, 0}; {-2, 6, -1, 6, 0, 2, 2, 1, 5, 5, 0, 0}; {-3, 6, 0, -4, 3, 6, -3, -3, 1, 3, 0, 0}; {-5, 3, -4, 3, -3, -1, 1, 0, 4, 4, 0, 0}; {-2, 5, -3, 3, -4, -4, 6, 5, -5, -4, 0, 0}; {-4, 4, -3, 4, -1, 1, 2, 0, 4, 5, 0, 0}; {5, 0, 4, -2, 4, 5, 5, 3, 6, 6, 0, 0}; {0, -5, -1, 5, -1, -3, -5, 6, -5, -3, 0, 0}; {-5, 1, 4, -3, 3, 1, -2, -4, -3, -3, 0, 0}; {5, -1, 2, -5, 1, -1, -2, -4, -4, -3, 0, 0}; {3, -3, 0, 5, -1, -2, -3, -5, -4, -4, 0, 0}; {3, -2, 2, -4, 3, 4, 4, 3, 5, 6, 0, 0}; {6, 3, -3, 5, 2, 6, -3, 4, 6, 0, 0, 0}; {6, 3, -3, 5, 2, 6, -3, 5, -5, 1, 0, 0}; {0, -5, -1, 5, 0, -3, -5, 5, -5, -4, 0, 0}; {1, -5, -2, 3, -3, 5, 0, -4, -4, -3, 0, 0}; {0, 6, -3, 2, -4, 4, -1, -4, -4, -4, 0, 0}; {-4, 2, 5, -2, 4, 1, -2, -4, -4, -2, 0, 0}; {3, -3, 0, 5, 0, -2, -3, -5, -4, -4, 0, 0}; {2, -4, -1, 4, -1, -3, -4, -5, -5, -3, 0, 0}; {2, -1, 5, 1, -1, 1, -5, -3, 6, -4, 0, 0}; {2, -2, 3, -2, -5, 2, 3, -4, -2, 1, 0, 0}; {-1, 5, -4, 1, -4, 3, -2, -4, -4, -4, 0, 0}; {6, 2, -5, 2, -1, -3, 0, 3, -4, -1, 0, 0}; {1, -5, -2, 3, -1, -2, 3, 3, 5, 1, 0, 0}; {4, 6, 5, 6, -1, 5, 0, -2, 4, 5, 0, 0}; {5, -3, -2, 2, -3, 6, -1, -5, -4, 3, 0, 0}; {1, 3, 2, 4, -2, 4, -1, -3, 4, 5, 0, 0}; {-2, -1, -3, -2, 3, -3, 3, 0, 6, 6, 0, 0}; {-4, 0, 1, 5, 2, 4, -2, 5, 2, 3, 0, 0}; {-1, 6, -2, 5, 5, -2, 2, 0, -3, -3, 0, 0}; {5, -4, -4, -1, -5, -3, 2, -4, 5, 4, 0, 0}; {5, -4, -4, -1, -5, -3, 3, -3, 5, 4, 0, 0}; {-1, 1, 0, 2, -3, 3, -2, -3, 4, 6, 0, 0}; {-4, -3, -5, -4, 2, -4, 2, 0, 6, -5, 0, 0}; {-2, 6, -1, -5, -3, 3, -4, -5, 6, -5, 0, 0}; {0, 5, -5, 0, -1, 6, -2, 6, 0, 0, 0, 0}; {6, 6, 3, 3, -3, 1, -5, 3, -3, -4, 0, 0}; {6, 6, 3, 3, -3, 1, -5, 3, -3, -3, 0, 0}; {5, 4, 0, -1, 4, -4, 1, -5, -1, -2, 0, 0}; {-1, -4, 2, -1, 2, 6, 0, 4, 5, 0, 0, 0}; {-1, -4, 2, -1, 3, -5, 0, 4, 5, 1, 0, 0}; {-3, -5, 2, 0, 6, 0, 5, -2, 2, 0, 0, 0}; {-3, 6, 0, -3, 2, 1, 3, -5, 2, 3, 0, 0}; {6, 2, -5, 3, -3, -1, 1, -1, 3, 4, 0, 0}; {5, 0, 4, -1, 4, 6, 5, 3, 6, 6, 0, 0}; {6, 2, -5, 3, -3, 0, 1, -1, 4, 4, 0, 0}; {-5, 4, -2, -5, 2, 6, -3, 4, 6, 1, 0, 0}; {2, -4, -1, 5, -3, 6, 2, -4, -5, -1, 0, 0}; {6, -1, 1, 6, -3, 6, 4, 0, -3, 0, 0, 0}; {4, -1, 3, -2, 4, 4, 5, 3, 5, 6, 0, 0}; {2,-3, 1, -4, 2, 3, 4, 2, 5, 5, 0, 0}; {4, 1, -5, 4, 0, 4, -4, 4, 6, 0, 0, 0}; {-1, 6, -2, 5, -1, -3, -5, 3, 5, -5, 0, 0}; {2, -4, -1, 5, -1, -3, -4, 6, -5, -4, 0, 0}; {3, -1, 4, 0, -4, -2, 1, -5, -3, 1, 0, 0}; {2, -1, 5, 2, -1, 3, -5, 4, 6, 0, 0, 0}; {-1, 6, -2, 5, 0, -3, -5, 5, -4, -3, 0, 0}; {6, -1, 1, 6, 0, -5, 2, -2, -2, -3, 0, 0}; {6, -1, 1, 6, 1, 0, 5, 3, 5, 1, 0, 0}; {6, 1, 5, 1, -2, 6, 3, 3, -4, -1, 0, 0}; {5, -3, -2, 3, -3, 5, -3, -5, -5, 4, 0, 0}; {5, -3, -2, 3, -3, 6, -3, -5, -4, 4, 0, 0}; {-5, 0, 2, -4, 3, 1, 6, 4, 5, 1, 0, 0}; {6, -1, 1, -5, 2, 0, 5, 3, 5, 1, 0, 0}; {6, 0, 3, -2, 6, 6, -1, 0, 2, 0, 0, 0}; {-1, 2, 2, 6, 0, -3, 2, -3, -2, 4, 0, 0}; {-4, 1, 3, -3, 6, -3, 4, 1, -1, 0, 0, 0}; {4, -4, -3, 2, -2, 2, -4, 3, 2, 1, 0, 0}; {2, 6, -5, 0, -4, 2, -5, -3, 5, 2, 0, 0}; {4, -4, -3, 2, -1, 2, -4, 3, 1, 2, 0, 0}; {5, 5, 2, 3, -3, 2, -4, 3, -3, -4, 0, 0}; {1, 0, -4, -4, 1, 6, -1, 6, -2, -3, 0, 0}; {6, 4, -1, -2, 4, -1, 4, -3, 1, 0, 0, 0}; {4, 0, 5, 2, -5, -2, 0, -2, 3, 3, 0, 0}; {5, 1, 6, 3, -3, 0, 1, -4, -3, 2, 0, 0}; {0, -5, -1, -5, 1, 2, 3, 1, 4, 5, 0, 0}; {2, -2, 3, 0, -5, -2, -1, -5, -4, 1, 0, 0}; {2, -2, 3, 0, -5, -2, 0, -5, -4, 1, 0, 0}; {-4, 3, -5, 3, -1, 0, 4, -3, -2, 1, 0, 0}; {5, -2, 0, -5, 1, -1, 2, 5, 3, 0, 0, 0}; {2, 6, -5, 1, 6, 3, 6, -3, 5, 1, 0, 0}; {4, -4, -3, 3, -4, 5, -4, -5, -5, 4, 0, 0}; {1, 5, 6, 0, 5, 3, -5, 5, 6, 2, 0, 0}; {2, 6, -5, 1, 6, 4, -4, 5, -5, 2, 0, 0}; {3, -4, -2, 5, -1, -2, 3, 1, 4, 0, 0, 0}; {2, 5, 5, -2, 3, -5, 1, -5, 5, 2, 0, 0}; {2, 5, 5, -2, 3, -5, 2, -5, 5, 3, 0, 0}; {6, 1, 5, 2, -1, -2, 4, -4, -2, -2, 0, 0}; {4, -4, -3, 3, -3, 5, -4, -5, -5, 5, 0, 0}; {1, 4, 4, -3, 2, -2, 0, -2, -3, 5, 0, 0}; {2, 6, -5, 1, -5, 4, -5, -5, 6, 3, 0, 0}; {4, -2, 1, -3, 5, 4, -3, 0, 0, -1, 0, 0}; {2, -5, -3, 4, -1, -3, 1, 3, 3, 2, 0, 0}; {0, 4, 5, -1, 5, 2, 5, -4, 4, 1, 0, 0}; {0, 3, 3, -4, 1, -3, 0, -3, -4, 3, 0, 0}; {3, -4, -2, 5, 0, -2, 3, 2, 4, 0, 0, 0}; {1, 5, 6, 0, 6, 3, -5, 5, 6, 2, 0, 0}; {-1, 2, 2, -5, 0, -4, -1, -2, -4, 4, 0, 0}; {0, 4, 5, -1, 5, 2, 6, -5, 4, 1, 0, 0}; {1, 5, 6, 0, 6, 3, -4, 5, 6, 2, 0, 0}; {0, 4, 5, -1, 5, 2, -5, 4, 5, 1, 0, 0}; {0, 4, 5, -1, 5, 3, 6, 5, 6, 3, 0, 0}; {1, 6, -4, 3, -2, -3, 1, 2, 3, 1, 0, 0}; {2, -4, -1, -5, 3, 3, -4, -1, 0, -1, 0, 0}; {-1, 3, 4, -2, 4, 2, 6, 5, 5, 2, 0, 0}; {-1, 2, 2, -5, 1, 5, -1, 6, 4, 2, 0, 0}; {0, 3, 3, -4, 2, -3, 1, -2, -3, 5, 0, 0}; {-2, 2, 3, -3, 4, 0, 5, -5, 4, 1, 0, 0}; {-2, 3, 5, 0, -4, 6, -1, 2, 1, 1, 0, 0}; {-3, 0, 0, 5, -1, -5, -1, -3, -4, 4, 0, 0}; {-2, 3, 5, 0, -4, -5, 0, 2, 2, 0, 0, 0}; {-5,-2,-2, 3, -3, 6, -2, -4, -5, 3, 0, 0}; {4, -2, 1, -3, -5, 0, -4, -5, -5, -3, 0, 0}; {0, 3, 3, -4, 3, 6, 0, 6, 4, 3, 0, 0}; {-3, 1, 2, -4, 4, -1, 4, -5, 3, 1, 0, 0}; {-2, 3, 5, 0, -3, 6, 0, 3, 1, -1, 0, 0}; {5, -3, -2, 4, 0, -3, 3, 5, 2, 0, 0, 0}; {2, 5, 5, -2, 6, 2, 6, -4, 4, 2, 0, 0}; {6, 2, -5, 5, -5, 0, -5, 6, 4, 6, 0, 0}; {4, 0, 5, 3, 5, -1, -4, -1, 2, 5, 0, 0}; {1, 0, -4, -3, 2, 5, 0, 6, -1, -3, 0, 0}; {-4, -1, -1, 4, 1, -3, 3, 6, 2, 4, 0, 0}; {2, 2, -1, 1, -5, 0, -4, 3, -4, -4, 0, 0}; {-2, -3, 5, 6, 0, 5, -3, 5, -1, -3, 0, 0}; {-4, 6, 1, 1, 6, -4, 2, -4, 1, -1, 0, 0}; {2, -3, 2, -1, 6, -3, -1, -5, -4, 1, 0, 0}; {-4, 1, 4, -1, 5, -3, -3, 2, 1, -1, 0, 0}; {1, -4, 1, -2, 6, 3, 1, 2, -5, -1, 0, 0}; {1, -5, -1, -5, 2, 3, -4, -2, -1, -3, 0, 0}; {3, -4, -1, 6, 1, -2, 2, 3, 4, 2, 0, 0}; {1, 5, -5, 1, -5, 3, -5, 6, 6, 4, 0, 0}; {1, 6, -3, 4, -1, -3, 1, 3, 3, 1, 0, 0}; {2, -4, 0, -4, 4, 3, -4, -1, 0, 0, 0, 0}; {0, 5, -4, 3, -2, -4, 0, 3, 2, 1, 0, 0}; {1, -5, -1, -5, 3, 2, -5, -1, -1, 0, 0, 0}; {-2, 2, 4, -2, 4, 1, 5, 5, 5, 3, 0, 0}; {-2, 2, 4, -2, 4, 1, 5, 6, 4, 1, 0, 0}; {-3, 1, 3, -3, 3, 0, 4, -5, 4, 1, 0, 0}; {1, -5, -1, -5, 3, 3, -4, -1, 0, -1, 0, 0}; {-2, 3, 6, 1, -4, -5, -1, 2, 2, 1, 0, 0}; {-1, 4, -5, 2, -3, -4, 0, 3, 1, -1, 0, 0}; {-1, 4, -5, 2, -3, -4, 0, 3, 2, 0, 0, 0}; {-1, 4, -5, 2, -3, -4, 1, 0, 3, 0, 0, 0}; {-1, 5, -3, 5, 1, 1, -5, -3, -1, -2, 0, 0}; {-3, 1, 3, -3, 3, 1, 5, 5, 5, 2, 0, 0}; {-2, 3, 6, 1, -4, -5, 0, 2, 1, -1, 0, 0}; {-2, 3, 6, 1, -4, -5, 1, 0, 2, -1, 0, 0}; {-3, 2, 5, 0, -5, -3, -4, 2, 0, -3, 0, 0}; {0, 6, -2, 6, 3, 1, 6, -2, -1, 0, 0, 0}; {-3, 0, 1, 6, 0, -5, -1, -2, -4, 4, 0, 0}; {6, -4, -4, 0, 5, -1, 3, 1, -2, 5, 0, 0}; {-2, 4, -4, 4, 1, 0, 5, -2, -2, 0, 0, 0}; {-3, 3, -5, 3, 0, -1, 5, -3, -2, -1, 0, 0}; {-5, -2, -1, 4, -2, 6, -2, -3, -5, 3, 0, 0}; {-5, -1, 1, -5, 2, -1, 4, 6, 3, 0, 0, 0}; {-5, -2, -1, 4, -2, 6, -1, -4, -5, 3, 0, 0}; {-4, 1, 4, -1, -5, 6, -1, 1, 2, 1, 0, 0}; {6, -3, -2, 3, -3, 6, -1, -5, -4, 3, 0, 0}; {-3, 0, 1, 6, 1, 4, -2, 5, 3, 1, 0, 0}; {3, -4, -1, 6, 4, 4, -3, 6, 1, -2, 0, 0}; {6, 5, 2, 3, -4, 2, -5, 3, -4, -4, 0, 0}; {0, -5, 0, -3, -2, 4, -3, -4, 6, -4, 0, 0}; {6, 5, 2, 3, -3, 2, -3, 4, -3, -3, 0, 0}; {2, -2, 4, 2, 5, -2, 4, 5, 4, 5, 0, 0}; {-1, 6, -1, -4, -2, 3, -4, -4, 6, 6, 0, 0}; {4, -1, 4, 1, 4, 4, -5, -3, 4, 4, 0, 0}; {4, -3, 0, -5, -3, 6, 2, -4, 6, -1, 0, 0}; {4, -1, 4, 1, 5, 5, 6, -3, 3, 4, 0, 0}; {-3, 4, -3, 6, -1, 2, 1, 0, 4, 4, 0, 0}; {-3, 5, -1, -2, 5, 0, 2, 2, 5, -1, 0, 0}; {2, -4, 0, -3, 5, 3, -4, -2, 0, 1, 0, 0}; {-1, 3, 5, 0, 6, 2, 5, 6, 5, 2, 0, 0}; {-1, 4, -5, 3, -2, -5, 0, 1, 3, 1, 0, 0}; {-1, 4, -5, 3, -2, -4, 0, 2, 2, 2, 0, 0}; {-5, -2, -1, 5, -2, 6, -3, -4, -5, 3, 0, 0}; {-5, -2, -1, 5, -2, 6, -3, -4, -5, 4, 0, 0}; {6, -3, -2, 4, -3, 5, -3, -5, -5, 3, 0, 0}; {-3, 2, 5, 1, -4, -5, -1, 2, 1, 0, 0, 0}; {-2, 4, -4, 5, 1, 1, 6, -2, -1, -2, 0, 0}; {0, -5, 0, -2, -5, -4, 3, 6, -3, -3, 0, 0}; {-4, 1, 4, 0, -5, 6, -1, 0, 2, 0, 0, 0}; {-3, 3, -5, 4, 0, 0, 6, -3, -1, -2, 0, 0}; {6, -2, 0, -5, 1, -1, 3, 4, 4, 2, 0, 0}; {-5, 0, 3, -1, 6, 5, -2, 2, 1, -1, 0, 0}; {5, -3, -1, 6, 0, -2, 2, 5, 3, 1, 0, 0}; {-4, 2, 6, 3, -1, 0, 6, -4, -1, -2, 0, 0}; {-4, 2, 6, 3, 0, -2, 4, -3, -2, -1, 0, 0}; {4, -5, -4, 2, -4, 4, -5, -3, 5, 2, 0, 0}; {5, -3, -1, 6, 1, -2, 2, 5, 3, 1, 0, 0}; {6, -1, 2, -2, 6, 4, -3, 1, 0, -1, 0, 0}; {5, -2, 1, -3, 5, 3, -4, 0, 0, 1, 0, 0}; {6, 0, 4, 1, -2, -3, 3, -4, -2, -1, 0, 0}; {1, 3, 3, -4, 1, -3, 2, -2, -3, 4, 0, 0}; {2, 5, 6, 0, 6, 3, 6, -4, 5, 2, 0, 0}; {4, -3, 0, -4, 4, 3, -4, 0, 0, 0, 0, 0}; {2, 5, 6, 0, -5, 2, 6, -3, 5, 2, 0, 0}; {1, -5, -1, -4, -5, -3, 3, 1, -3, -4, 0, 0}; {-3, 3, -5, 4, 4, -5, 2, -1, -5, -5, 0, 0}; {2, -5, -2, 6, 5, -1, 4, 1, -3, -2, 0, 0}; {-4, 3, -4, 6, -4, 1, -5, -5, 5, 6, 0, 0}; {5, 1, -5, 6, -1, -1, 2, 6, 1, 2, 0, 0}; {-5, 0, 3, -1, 1, -1, 3, 1, 6, 5, 0, 0}; {5, 0, 5, 3, -4, -1, 0, -2, 3, 3, 0, 0}; {-1, -5, 1, 1, -5, 0, 4, 4, 6, 1, 0, 0}; {-3, 4, -3, -4, 1, 6, -4, -5, -4, 2, 0, 0}; {-2, 6, 0, 0, 6, 0, 3, 3, 5, 0, 0, 0}; {-2, 6, 0, 0, 6, 0, 3, 4, 5, 0, 0, 0}; {-4, 3, -4, -5, 1, 5, -4, -5, -4, 2, 0, 0}; {-4, 3, -4, -5, 2, 5, -4, -5, -4, 2, 0, 0}; {-3, 2, 5, 2, -3, 6, -1, 0, 3, 1, 0, 0}; {0, 3, 4, -1, 5, 1, 5, -4, 5, 2, 0, 0}; {-2, 0, 0, 6, -1, -5, 1, -4, -4, 3, 0, 0}; {1, -3, 3, 3, -5, -1, 6, 2, 2, -1, 0, 0}; {1, -4, 1, 0, 3, -2, 2, 5, 6, 4, 0, 0}; {0, -3, 4, 5, -1, 6, -1, 0, 2, -2, 0, 0}; {-4, 4, -2, -1, 4, -2, 3, 3, 5, 0, 0, 0}; {5, 0, 5, 5, -3, 3, 6, 6, 6, 1, 0, 0}; {4, -1, 4, 4, -2, 3, 5, 5, -5, 1, 0, 0}; {-5, 3, -3, -2, 5, -2, 1, 3, 4, 0, 0, 0}; {5, 1, -5, -4, 4, -3, 0, 3, 4, -1, 0, 0}; {3, -2, 3, 3, -2, 2, 5, 5, -5, 1, 0, 0}; {-2, 5, -2, -2, 5, -1, -5, -5, 6, 0, 0, 0}; {3, -2, 3, 3, -1, 0, 6, 5, -3, 0, 0, 0}; {6, 3, -2, 0, -2, 2, -5, -1, 0, -4, 0, 0}; {-1, 5, -3, -4, 3, 4, -2, -5, -1, 0, 0, 0}; {4, -2, 2, 2, -3, 2, -2, -3, -5, 1, 0, 0}; {2, -5, -2, -3, 3, -5, 2, 0, -2, 2, 0, 0}; {1, 6, -3, -4, 2, 6, 2, -2, -2, 2, 0, 0}; {2, -4, 0, 0, -5, 1, -3, -4, -5, 0, 0, 0}; {1, -5, -1, -1, 6, 0, -4, -4, 6, -1, 0, 0}; {0, -3, 4, -4, 4, -4, 0, 1, -2, -3, 0, 0}; {-1, -4, 3, -5, 3, -5, -1, 1, -3, -3, 0, 0}; {-1, -4, 3, -5, 5, -2, 1, -5, -1, 1, 0, 0}; {0, 6, -2, -1, 6, -1, -4, -5, 6, -1, 0, 0}; {-2, 3, 6, 6, 0, 4, 0, -1, -4, 1, 0, 0}; {-2, 3, 6, 6, 0, 5, 0, -1, -4, 1, 0, 0}; {1, -1, -5, 0, 0, 4, -3, 4, -4, 1, 0, 0}; {6, 3, -2, 3, 6, 2, 6, 5, 5, 6, 0, 0}; {1, -2, 5, -2, 6, -3, -1, -1, 2, 4, 0, 0}; {-1, -5, 1, 5, 0, 2, 3, 2, 5, 5, 0, 0}; {2, 0, -4, 2, 0, 5, -3, 4, -5, 0, 0, 0}; {-1, -4, 3, -4, 5, -2, 1, -5, -2, 1, 0, 0}; {-3, 3, -5, -3, 3, -3, 6, -5, 6, -1, 0, 0}; {-1, -3, 5, -1, -3, 0, 6, -3, 5, -4, 0, 0}; {1, 0, -3, 4, 4, -3, 3, -1, 4, -2, 0, 0}; {-1, -3, 5, -1, -2, 2, -5, 2, 6, -1, 0, 0}; {-3, 6, 1, 6, 4, -3, 0, 6, -2, 1, 0, 0}; {-2, -4, 4, -2, -2, 2, -5, 2, 6, 0, 0, 0}; {-2, -4, 4, -2, -2, 2, -5, 2, -5, 0, 0, 0}; {-2, 6, 0, 5, -3, -5, -4, -2, 2, 3, 0, 0}; {-1, -4, 3, -3, 2, 2, 3, -5, -1, 2, 0, 0}; {-3, 6, 1, -5, 1, 1, 2, -5, -2, 2, 0, 0}; {3, -1, 5, -2, 4, 5, 4, 3, 6, 6, 0, 0}; {2, -2, 4, -3, 3, 4, 3, 2, 5, 6, 0, 0}; {3, 0, -5, 1, -4, -2, -1, -1, 3, 4, 0, 0}; {1, -2, 5, -1, 6, -3, -1, -1, 2, 4, 0, 0}; {0, -3, 4, -2, 5, -4, -2, -1, 2, 3, 0, 0}; {-1, -5, 1, 6, 0, 2, 4, 3, 5, 5, 0, 0}; {-1, -4, 3, -3, 4, -5, -2, -2, 2, 3, 0, 0}; {-1, -3, 5, 0, -4, 0, 5, -5, -2, 1, 0, 0}; {-2, 5, -2, 2, -4, -3, -5, 5, -4, -4, 0, 0}; {-3, 5, -1, 4, -1, 1, 2, 1, 4, 5, 0, 0}; {-3, 5, -1, 4, -1, 1, 2, 1, 5, 5, 0, 0}; {-3, 5, -1, 4, -1, 1, 2, 2, 4, 5, 0, 0}; {-2, -5, 2, -4, 4, -5, -3, -2, 2, 3, 0, 0}; {0, -4, 2, -5, 2, 1, 4, 6, -1, 1, 0, 0}; {1, -3, 3, -4, 3, 3, 3, 2, 5, 6, 0, 0}; {-2, 6, 0, 5, 0, 1, 3, 2, 4, 5, 0, 0}; {-5, 2, -5, -1, 5, 5, -4, -4, 2, 1, 0, 0}; {-4, 3, -4, 0, -5, -5, 6, 4, -5, -5, 0, 0}; {-4, 4, -2, 3, -1, 0, 2, 1, 4, 5, 0, 0}; {-4, 3, -4, 0, -5, -4, 6, 4, -5, -5, 0, 0}; {-4, 3, -4, 0, -5, -4, 6, 4, -4, -4, 0, 0}; {-3, 5, -1, 4, 0, 2, 2, 1, 5, 5, 0, 0}; {-4, 4, -2, 3, -1, 1, 1, 0, 4, 5, 0, 0}; {6, 2, -4, 1, -3, -1, 0, 0, 4, 5, 0, 0}; {-1, -3, 5, 0, -2, 2, 6, 2, 5, -1, 0, 0}; {-4, 3, -4, 0, -4, -4, 6, 4, -4, -4, 0, 0}; {-3, -5, 3, -2, -3, 0, 5, 1, 4, -2, 0, 0}; {-3, -5, 3, -2, -3, 0, 6, 1, 5, -2, 0, 0}; {6, 1, 6, -2, 6, -5, 5, 3, -5, -5, 0, 0}; {5, 0, 5, -3, 5, 6, 4, 3, -5, -4, 0, 0}; {-2, -4, 4, -1, -2, 2, -5, 2, 6, -1, 0, 0}; {-4, 5, 0, 6, 4, -4, 0, 6, -3, 1, 0, 0}; {-4, 6, 2, -3, -4, 1, 6, 1, 5, -1, 0, 0}; {-5, 5, 1, -4, -5, 0, 5, 1, 5, -1, 0, 0}; {6, 3, -2, 4, 2, -5, -2, 5, -4, 0, 0, 0}; {6, 3, -2, 4, 3, -5, -2, 5, -4, 1, 0, 0}; {0, -4, 2, -4, -1, -3, -3, 0, 5, 5, 0, 0}; {-2, 6, 0, 6, -2, -5, -4, -1, 4, 4, 0, 0}; {-1, -4, 3, -2, 3, 2, 3, -4, 1, 3, 0, 0}; {2, -3, 2, -5, -2, -3, -2, -2, -5, 6, 0, 0}; {-4, 4, -2, 4, -3, 6, -5, -1, 3, 4, 0, 0}; {-1, -5, 1, -5, 0, 2, 3, 2, 4, 5, 0, 0}; {-2, 6, 0, 6, 0, 2, 2, 1, 4, 5, 0, 0}; {-4, 5, 0, -5, 2, 5, -3, -2, 1, 2, 0, 0}; {-4, 5, 0, -5, 2, 6, -3, -2, 1, 3, 0, 0}; {2, -2, 4, -2, 4, 4, 3, 2, 5, 6, 0, 0}; {-2, 6, 0, 6, 0, 0, 4, 6, -1, 1, 0, 0}; {-5, 3,

-3, 3, -2, 0, 1, 0, 4, 4, 0, 0}; {5, 1, -5, 1, -4, -2, 1, 1, 3, 4, 0, 0}; {-5, 3, -3, 3, -2, -2, 3, 5, -2, 0, 0, 0}; {5, 0, 5, -2, 5, 6, 5, 3, -5, -5, 0, 0}; {6, 3, -2, 5, 2, 5, -4, 4, 6, 0, 0, 0}; {3, -2, 3, -4, 3, 4, 5, 3, 6, 6, 0, 0}; {4, -1, 4, -3, 5, 5, 4, 3, 6, -5, 0, 0}; {3, -1, 5, -1, -4, -2, 0, -1, 3, 4, 0, 0}; {5, 3, -1, -5, 6, -2, 3, 0, 3, -2, 0, 0}; {0, 6, -2, 2, -2, -4, -4, 6, -4, -4, 0, 0}; {5, 3, -1, -5, -5, -1, 3, 0, 3, -2, 0, 0}; {4, 2, -2, 6, 6, -2, 3, -1, 3, -2, 0, 0}; {1, -2, 5, 0, 0, 4, -5, 3, 6, 0, 0, 0}; {-4, 4, -2, 5, 4, -5, -3, 5, 6, 0, 0, 0}; {-1, -5, 1, -4, -2, 4, -3, -4, 6, -4, 0, 0}; {6, 1, 6, 0, 2, 0, 0, 1, 6, 6, 0, 0}; {6, 1, 6, 0, 2, 0, 0, 1, -5, 6, 0, 0}; {5, 0, 5, -1, 1, -1, 0, 0, 6, 6, 0, 0}; {-5, 3, -3, 4, -4, 6, -5, -2, 4, 4, 0, 0}; {5, 0, 5, -1, 2, -1, -1, 1, -5, -5, 0, 0}; {4, -1, 4, -2, 1, -1, -1, 0, 6, 6, 0, 0}; {6, 2, -4, 3, -5, 6, -5, -2, 4, 4, 0, 0}; {3, -2, 3, -3, 0, -2, -2, 0, -5, 6, 0, 0}; {4, 0, 6, 1, 6, 5, 5, -3, 1, 3, 0, 0}; {1, -4, 1, -5, -1, -3, -2, -1, 6, 6, 0, 0}; {3, -1, 5, 0, 5, 5, 5, -2, 1, 3, 0, 0}; {-1, -5, 1, -4, 1, 2, 1, 1, 5, 6, 0, 0}; {5, 1, -5, 2, -4, -2, 0, -1, 3, 4, 0, 0}; {4, -1, 4, -2, 3, 5, 4, 2, 6, 6, 0, 0}; {4, -1, 4, -2, 3, 5, 5, 3, 6, 6, 0, 0}; {5, 1, -5, 2, -4, -1, 0, 0, 3, 4, 0, 0}; {6, 0, 4, -3, 2, 0, -2, -4, -4, -3, 0, 0}; {3, -2, 3, -3, 3, 4, 4, 3, 5, 6, 0, 0}; {4, 0, 6, 1, -4, -2, -1, -1, 3, 4, 0, 0}; {3, -1, 5, 0, -5, -2, -1, -1, 3, 4, 0, 0}; {4, 0, 6, 1, -4, -1, 0, -1, 3, 4, 0, 0}; {-2, 5, -2, 4, -2, -4, 6, 4, 6, -5, 0, 0}; {1, -5, -1, 4, -2, -3, -4, 6, -5, -4, 0, 0}; {4, -1, 4, -2, 5, 6, 4, 3, -5, -5, 0, 0}; {1, -4, 1, -5, 2, 3, 3, 2, 5, 6, 0, 0}; {0, -5, 0, 6, 1, 2, 3, 2, 5, 5, 0, 0}; {1, -4, 1, -5, 2, 4, 4, 2, 6, 6, 0, 0}; {0, -5, 0, 6, 1, 3, 3, 2, 5, 6, 0, 0}; {-3, 3, -5, 0, 6, 2, -2, -5, -5, -4, 0, 0}; {1, -5, -1, 4, -1, -3, -5, 6, -5, -4, 0, 0}; {3, -2, 3, -3, 5, 6, 4, 3, -5, -5, 0, 0}; {-1, 5, -3, 2, -3, -3, -5, 5, -4, -4, 0, 0}; {0, -4, 2, -3, 6, -3, 0, 6, -4, 1, 0, 0}; {1, -2, 5, 1, -1, 3, -5, 3, 6, -1, 0, 0}; {1, -3, 3, -2, -5, -2, -1, -2, 3, 4, 0, 0}; {0, -4, 2, -3, 6, -3, -1, 6, -4, 1, 0, 0}; {1, -2, 5, 1, -1, 3, 6, 3, 5, -1, 0, 0}; {0, -5, 0, 6, 3, 2, 3, 2, 5, -5, 0, 0}; {-1, 5, -3, 2, -2, -3, -5, 6, -4, -4, 0, 0}; {-3, 3, -5, 0, -4, -5, 5, -5, -5, 0, 0}; {-2, 6, 0, -5, 5, -4, -2, 6, -5, 1, 0, 0}; {-2, 6, 0, -5, 5, -4, -1, 6, -4, 1, 0, 0}; {-3, 5, -1, 6, 4, -5, -2, 5, -5, 0, 0, 0}; {-1, -4, 3, -1, -2, 2, 6, 2, 5, 0, 0, 0}; {1, -5, -1, 5, 1, -2, 3, 3, 4, 4, 0, 0}; {-4, 3, -4, 3, 0, 2, 2, 0, 5, 6, 0, 0}; {4, -4, -2, 2, -3, 5, -3, -4, -4, 4, 0, 0}; {5, -2, 1, 6, 2, 0, 5, 4, 6, 2, 0, 0}; {-4, 1, 4, -3, -4, 4, -4, 4, -1, -1, 0, 0}; {0, 0, -2, -2, 4, -1, 4, 1, 6, -4, 0, 0}; {5, 1, -5, 3, 6, 5, 6, -2, 4, 5, 0, 0}; {4, 0, 6, 2, 6, 5, 6, -2, 2, 4, 0, 0}; {4, 0, 6, 2, 6, 5, 6, -2, 3, 4, 0, 0}; {3, -1, 5, 1, 5, 4, 6, -3, 3, 4, 0, 0}; {1, -4, 1, -4, -1, -3, -2, 0, 6, 6, 0, 0}; {-1, 5, -3, 3, 5, 3, 2, 3, -4, -5, 0, 0}; {0, -5, 0, -5, -1, -3, -3, 0, 5, 5, 0, 0}; {-1, 6, -1, 6, -2, -4, -3, -1, 5, 5, 0, 0}; {4, -1, 4, -1, 4, 5, 5, 3, 5, 6, 0, 0}; {4, 0, 6, 2, -4, -1, 0, -1, 3, 4, 0, 0}; {-5, 0, 3, -4, 0, -4, 4, -2, -4, -1, 0, 0}; {-5, 0, 3, -4, 0, -3, 5, -3, -4, 0, 0, 0}; {-1, 6, -1, 6, 0, 2, 3, 1, 5, 5, 0, 0}; {5, -1, 3, -3, 3, 0, -4, 5, 6, -5, 0, 0}; {5, -1, 3, -3, 3, 0, -3, 5, 6, -5, 0, 0}; {1, -3, 3, -1, -5, -3, 0, 5, -4, 1, 0, 0}; {-1, -5, 1, -3, 5, -4, -1, 6, -4, 1, 0, 0}; {-1, 5, -3, 3, -2, -5, 6, 5, 6, -4, 0, 0}; {-3, 3, -5, 1, -4, 6, 6, 5, 6, -5, 0, 0}; {-5, 1, 5, -1, 6, 6, 5, 4, 6, -5, 0, 0}; {-3, 5, -1, -5, 4, -5, -3, 6, -5, 1, 0, 0}; {-5, 1, 5, -1, 6, -5, -5, 4, -5, -5, 0, 0}; {-5, 1, 5, -1, 6, -5, 6, 4, -5, -5, 0, 0}; {-5, 1, 5, 0, -5, 5, 5, 4, 5, -5, 0, 0}; {4, 0, 6, 3, 0, 4, -5, 4, 6, 0, 0, 0}; {2, 6, -4, 1, -5, 4, -5, -4, 6, 2, 0, 0}; {2, 6, -4, 1, -5, 4, -4, -5, -5, 3, 0, 0}; {0, 4, 6, -1, 5, 3, -5, 6, 6, 2, 0, 0}; {-1, 2, 3, -5, 1, 5, 0, 6, 4, 2, 0, 0}; {5, -2, 1, -5, 3, -1, 4, 4, 5, 3, 0, 0}; {3, -2, 3, -1, -3, -4, 2, -5, -3, -1, 0, 0}; {2, 6, -4, 1, -4, 4, -4, -5, -5, 4, 0, 0}; {-1, 2, 3, -5, 1, -4, 0, -1, -3, 4, 0, 0}; {0, 4, 6, -1, 6, 3, -4, 6, -5, 3, 0, 0}; {0, 4, 6, -1, 6, 3, -3, 6, -5, 2, 0, 0}; {-2, 2, 4, -3, 4, 2, -5, 5, 6, 2, 0, 0}; {2, -3, 2, -2, 0, 5, -3, -3, -5, -5, 0, 0}; {-4, 3, -4, 4, -5, 6, -3, -2, 4, 4, 0, 0}; {6, -2, 0, 5, 6, 2, -3, 1, -2, 1, 0, 0}; {6, -1, 2, -4, -2, -5, 4, -2, -5, 0, 0, 0}; {0, -5, 0, -4, 0, 3, 3, 1, 4, 5, 0, 0}; {0, -3, 4, 2, -4, 2, -5, 0, 3, 1, 0, 0}; {-3, 4, -3, 5, -3, -5, -4, -2, 5, 5, 0, 0}; {4, -3, 0, 6, -3, 6, 3, -4, 6, -1, 0, 0}; {0, -4, 2, -1, 5, -4, -2, -3, 2, 3, 0, 0}; {-3, 4, -3, 5, -2, 1, 2, 0, 4, 4, 0, 0}; {-1, 6, -1, -5, 1, 3, 2, 1, 5, 5, 0, 0}; {-5, 1, 5, 0, 5, 6, 5, 3, 6, 6, 0, 0}; {-4, 3, -4, 4, -2, 1, 2, -1, 5, 5, 0, 0}; {-3, 4, -3, 5, -1, 2, 2, 0, 5, 5, 0, 0}; {-5, 2, -5, 3, -2, 0, 2, -3, -2, 2, 0, 0}; {0, -5, 1, -3, 4, 3, 3, -4, -1, 2, 0, 0}; {-5, 2, -4, 4, -1, 1, 0, 0, 4, 4, 0, 0}; {4, -1, 5, 1, -4, -1, 0, -1, 3, 4, 0, 0}; {3, -3, 2, -3, 4, 5, 4, 3, 6, 6, 0, 0}; {6, -1, 3, -3, 4, 0, -4, 6, 6, -5, 0, 0}; {-3, 1, 4, -3, 3, 1, 6, 4, 6, 2, 0, 0}; {0, -5, 1, -3, 6, -4, -1, 6, -5, 0, 0, 0}; {-1, 5, -2, 5, 1, 2, 5, -2, -1, 1, 0, 0}; {-1, 5, -2, 5, 1, 4, 3, 1, -5, -5, 0, 0}; {-3, 1, 4, -3, 4, 2, -5, 5, 6, 2, 0, 0}; {-1, 6, 0, -4, 6, -4, -1, 6, -5, 0, 0, 0}; {-3, 0, 2, 6, 1, 4, 1, 6, 4, 2, 0, 0}; {-3, 3, -4, 3, 3, -2, 0, -1, -4, -2, 0, 0}; {4, 2, -1, -2, 3, 6, -1, 6, -1, -2, 0, 0}; {-4, 2, -5, 2, 3, -3, 0, -1, -4, -3, 0, 0}; {6, -1, 3, -3, -3, 3, 4, 2, -2, -1, 0, 0}; {-5, 2, -4, 4, -5, 6, -5, -2, 5, 5, 0, 0}; {-5, 2, -4, 4, -5, -5, -5, -2, 4, 5, 0, 0}; {-4, 4, -1, -4, 0, 1, 3, 6, 2, 3, 0, 0}; {3, -3, 2, -3, -1, -2, 0, -1, 6, 5, 0, 0}; {0, -4, 3, 0, 4, -3, 2, 4, 3, 4, 0, 0}; {-3, 4, -2, 6, -3, 2, 6, -5, 6, 6, 0, 0}; {-5, 2, -4, 4, -4, -5, -5, -2, 3, 4, 0, 0}; {6, 1, -5, 3, -5, 6, -5, -2, 4, 5, 0, 0}; {4, -1, 5, 1, 5, 4, 6, -4, 4, 4, 0, 0}; f 2, -4, 1, -4, -1, -3, -2, -1, 6, 6, 0, 0}; {0, 4, -5, 0, 1, -2, 6, -1, -4, 1, 0, 0}; {5, 0, 6, 2, 6, 6, 6, -2, 2, 4, 0, 0}; {3, -3, 2, -3, 0, -1, -1, 0, 6, 6, 0, 0}; {-2, 6, 1, -2, 3, -4, 0, 3, 3, 3, 0, 0}; {-4, 3, -3, 5, -3, 1, 5, -5, 6, 5, 0, 0}; {-1, 4, -4, 2, 5, 3, 1, -5, 5, -1, 0, 0}; {2, -3, 3, -1, 4, 4, 5, -3, 1, 3, 0, 0}; {6, 1, -5, 3, -4, 0, 1, -1, 3, 4, 0, 0}; {3, -2, 4, 1, -5, -2, -1, -2, 3, 3, 0, 0}; {-2, 4, -3, 5, -1, 2, 2, 0, 4, 4, 0, 0}; {-5, 0, 4, -1, 6, -4, -5, 3, -1, -3, 0, 0}; {6, -1, 3, -2, 5, -5, -5, 1, -1, -4, 0, 0}; {5, -4, -2, 3, -4, 5, -3, -5, -5, 3, 0, 0}; {-4, 1, 5, 0, -5, -4, -4, 2, 0, -3, 0, 0}; {-5, 0, 4, -1, 6, -5, -5, 2, 0, -3, 0, 0}; {-2, 3, -5, 2, -2, -5, 0, 2, 3, 2, 0, 0}; {-3, 1, 4, -2, 5, 1, 6, 6, 6, 4, 0, 0}; {-3, 3, -4, 4, 1, 0, 5, -3, -1, 0, 0, 0}; {-4, 2, -5, 3, 0, -1, 4, -3, -2, -1, 0, 0}; {-5, 0, 4, -1, -5, 5, -2, 1, 2, 1, 0, 0}; {-4, 2, -5, 3, 0, -1, 5, -3, -1, 0, 0, 0}; {-4, 1, 5, 0, -4, 6, 0, 1, 3, 0, 0, 0}; {6, -2, 1, -5, 2, -1, 4, 4, 5, 2, 0, 0}; {4, -5, -3, 2, -4, 4, -4, -3, 6, 2, 0, 0}; {5, -2, 2, -3, 5, 4, -4, 0, 0, 1, 0, 0}; {1, 4, 6, -1, 6, 1, -5, -4, 4, 1, 0, 0}; {2, 5, -5, 0, -5, 4, -3, 6, -5, 3, 0, 0}; {2, 5, -5, 0, -5, 4, -2, 6, -5, 2, 0, 0}; {2, 5, -5, 0, -4, 2, -4, -3, -5, 3, 0, 0}; {-4, 2, -5, 3, 3, -4, 0, -1, -4, -3, 0, 0}; {-2, 5, -1, -4, -3, 4, -4, -5, 6, -4, 0, 0}; {5, -2, 2, -3, -4, 2, 3, 2, -2, -1, 0, 0}; {4, -3, 1, -4, -5, 1, 3, 1, -2, -1, 0, 0}; {3, -3, 2, -2, -2, 6, -2, -3, -5, -4, 0, 0}; {-1, 4, -4, 3, 2, -2, 2, -1, -4, -3, 0, 0}; {3, 2, 0, 1, -5, 0, 6, 2, -4, -4, 0, 0}; {3, 2, 0, 1, -5, 0, -5, 2, -4, -4, 0, 0}; {-1, 4, -4, 3, 3, 2, 4, 2, -5, 6, 0, 0}; {-5, 1, 6, 2, 3, 6, 0, -2, -5, -5, 0, 0}; {3, -4, 0, -5, -5, 1, 3, 1, -3, -1, 0, 0}; {1, -4, 2, -1, 2, 2, 5, -5, 3, 4, 0, 0}; {0, -5, 1, -2, 1, 2, 5, -5, 3, 4, 0, 0}; {-4, 3, -3, 6, -3, 1, 6, -5, 6, 5, 0, 0}; {-1, 3, 6, 0, 1, -3, 5, -2, -5, 0, 0, 0}; {3, -2, 4, 1, 5, 5, 5, -4, 3, 4, 0, 0}; {-3, 3, -4, 4, -4, -5, -3, -2, 5, 5, 0, 0}; {-2, 3, -5, 2, 5, 3, 0, 6, 5, -1, 0, 0}; {1, -4, 2, -1, 4, 4, 4, -4, 1, 3, 0, 0}; {0, -5, 1, -2, 3, 3, 4, -4, 1, 3, 0, 0}; {1, -5, 0, -4, 0, 4, 4, 1, 5, 5, 0, 0}; {-5, 0, 4, 0, 3, -3, -4, 2, 0, -2, 0, 0}; {-1, 6, 0, -2, 4, -5, -2, -4, 1, 2, 0, 0}; {-2, -5, 3, 3, -1, 5, -2, -1, 2, -2, 0, 0}; {-4, 4, -1, -2, 5, -1, 3, 3, 5, 0, 0, 0}; {4, -3, 1, -3, 4, -1, -4, -5, 0, 1, 0, 0}; {-5, 0, 4, 0, -5, 5, -2, 0, 1, 1, 0, 0}; {6, -2, 1, -4, 2, -1, 4, 3, 4, 3, 0, 0}; {4, -5, -3, 3, -4, 4, -4, 6, 6, 4, 0, 0}; {5, -3, 0, -5, 1, -1, 2, 5, 3, 1, 0, 0}; {6, -1, 3, -1, 6, 5, -3, 1, 1, 0, 0, 0}; {-5, -1, 2, -3, 4, 0, 4, 5, 5, 3, 0, 0}; {6, -2, 1, -4, 3, -1, 4, 4, 5, 3, 0, 0}; {-5, 0, 4, 0, -4, 5, -1, 1, 3, 1, 0, 0}; {6, 0, 5, 2, -1, -2, 4, -4, -2, -1, 0, 0}; {5, -2, 2, -2, 6, 4, -2, 0, 2, 0, 0, 0}; {2, 5, -5, 1, -5, 3, -5, -4, 5, 2, 0, 0}; {3, -3, 2, -1, -4, -5, 2, -5, -3, -2, 0, 0}; {0, 3, 5, -1, 5, 2, -4, 5, 5, 1, 0, 0}; {2, 6, -3, 4, -1, -3, 0, 4, 2, 0, 0, 0}; {3, -4, 0, -4, 4, 3, -4, -1, 0, 1, 0, 0}; {2, 6, -3, 4, -1, -3, 1, 4, 2, 0, 0, 0}; {2, 6, -3, 4, -1, -3, 1, 4, 3, 1, 0, 0}; {2, -5, -1, -5, 3, 2, -5, -1, 0, 0, 0, 0}; {1, 5, -4, 3, -2, -4, 0, 4, 2, 0, 0, 0}; {0, 3, 5, -1, 6, 3, -3, 5, 6, 2, 0, 0}; {-1, 2, 4, -2, 5, 2, -4, 5, 6, 2, 0, 0}; {-1, 1, 2, -5, 1, -4, 1, -2, -3, 5, 0, 0}; {4, -2, 3, 0, 0, 6, -1, -3, -5, -4, 0, 0}; {1, 6, -2, 6, 5, -1, 2, 0, -3, -2, 0, 0}; {1, -5, 0, -3, -3, 5, -2, -4, 6, -4, 0, 0}; {-2, 3, -5, 3, 2, -3, 1, -1, -3, -3, 0, 0}; {-3, 2, 6, 2, 1, -3, 1, -2, -4, -3, 0, 0}; {1, 0, -2, 0, 6, -1, 4, 1, -5, -4, 0, 0}; {0, 6, -1, -4, -3, 4, -3, -4, 6, -5, 0, 0}; {-3, 2, 6, 2, 2, -3, 1, -1, -4, -3, 0, 0}; {2, -2, 5, 4, -3, -3, 0, 4, 1, 2, 0, 0}; {-2, 6, 1, 1, 6, -5, -1, 3, 0, 1, 0, 0}; {6, 2, -3, -3, 3, -2, 2, 3, 4, 0, 0, 0}; {-4, 5, 1, 2, -3, 3, -3, -2, 1, -2, 0, 0}; {-4, 4, -1, -1, 5, -1, 2, 3, 4, 0, 0, 0}; {-4, 5, 1, 2, -3, 4, -3, -1, 1, -2, 0, 0}; {6, 1, -5, 6, -1, 4, -5, 6, 6, 1, 0, 0}; {-5, 3, -2, -2, 4, -2, 2, 2, 4, 0, 0, 0}; {6, 2, -3, -3, 3, -3, 2, 2, 4, -1, 0, 0}; {3, -2, 4, 3, -3, 2, 5, 5, 6, 1, 0, 0}; {4, 0, -5, -5, 2, -4, 0, 1, 4, -1, 0, 0}; {3, -2, 4, 3, -3, 2, 5, 6, -5, 1, 0, 0}; {3, -2, 4, 3, -3, 2, 6, 5, 6, 0, 0, 0}; {3, -2, 4, 3, -3, 3, 5, 4, 6, 0, 0, 0}; {-5, 4, 0, 1, -3, 3, -4, -2, 1, -2, 0, 0}; {4, -1, 5, 4, -1, 3, 6, 5, 6, 1, 0, 0}; {2, -2, 5, 5, 1, -5, -1, 0, 3, -2, 0, 0}; {3, 0, -4, -3, -5, 0, -4, 0, 2, -4, 0, 0}; {0, 5, -3, 6, 2, 1, -5, -1, 0, -1, 0, 0}; {-2, 2, 5, 1, -4, 6, -1, 3, 1, 0, 0, 0}; {-2, 2, 5, 1, -4, 6, -1, 3, 2, 0, 0, 0}; {-4, -1, 1, -4, 2, -1, 3, -5, 4, 2, 0, 0}; {-3, 0, 2, -3, 3, 1, -4, 4, 5, 1, 0, 0}; {0, 4, -5, 3, -2, -5, 0, 3, 3, 1, 0, 0}; {2, -5, -1, -4, 4, 2, -5, -1, 0, 0, 0, 0}; {6, -3, -1, 6, 1, -2, 2, 6, 3, 1, 0, 0}; {-1, -3, 6, -3, 3, -3, -5, 4, -4, -2, 0, 0}; f 5, 0, 6, 6, -2, 4, 6, 6, -5, 2, 0, 0}; {5, 0, 6, 6, -2, 4, -5, 6, -5, 2, 0, 0}; {5, 1, -4, -3, 2, -3, 1, 2, 4, -1, 0, 0}; {3, -2, 4, 4, -4, 2, 6, 5, 5, 0, 0, 0}; {4, 0, -5, -4, 1, -4, 1, 1, 3, -1, 0, 0}; {3, -1, 6, -5, 1, -5, 0, 1, 3, -1, 0, 0}; {3, -2, 4, 4, -3, 3, 5, 5, 6, 1, 0, 0}; {3, -1, 6, -5, 1, -4, 0, 1, 4, -1, 0, 0}; {1, -4, 2, 2, -5, 1, 4, 5, 5, 0, 0, 0}; {0, -5, 1, 1, 6, 0, 4, 5, 5, 0, 0, 0}; {0, -5, 1, 1, 6, 1, 4, 4, 5, 0, 0, 0}; {3, -1, 6, -5, 2, -5, 0, 3, 3, -2, 0, 0}; {2, -3, 3, 3, -3, 2, 5, 5, 6, 1, 0, 0}; {1, -4, 2, 2, -4, 1, 4, 5, 5, 0, 0, 0}; {0, -5, 1, 1, -5, 0, 4, 4, 6, 0, 0, 0}; {-1, 5, -2, -3, 2, 6, -2, -4, -4, 1, 0, 0}; {0, -5, 1, 1, -5, 1, 3, 4, 6, 0, 0, 0}; {-2, 4, -3, -4, 1, 6, -4, -5, -4, 1, 0, 0}; {5, -1, 4, 3, -3, 1, -1, -3, -4, 1, 0, 0}; {-2, 5, -1, -1, 6, -1, 2, 3, 5, 0, 0, 0}; {-5, 1, 6, 5, -1, 5, 6, 5, -5, 0, 0, 0}; {4, -2, 3, 2, -3, 2, -2, -3, -4, 1, 0, 0}; {6, -2, 1, -2, 4, 0, 4, 3, 3, 4, 0, 0}; {-2, 3, -5, 5, 1, -1, 5, -2, 0, -1, 0, 0}; {1, -3, 4, 6, -2, 0, -5, 2, 0, 1, 0, 0}; {1, -4, 2, 3, -5, 1, 5, 5, 5, 0, 0, 0}; {-1, -5, 2, 4, -3, 5, -1, 0, 1, -2, 0, 0}; {0, -5, 1, 2, 6, 1, 3, 5, 5, 0, 0, 0}; {-2, 4, -3, -3, 1, 6, -4, -5, -4, 2, 0, 0}; {-3, 4, -2, -1, 4, -1, 3, 3, 5, 0, 0, 0}; {-1, 6, 0, 1, 6, 1, 3, 4, 5, 0, 0, 0}; {-5, 1, 6, 6, -1, 4, -5, 6, -5, 1, 0, 0}; {-1, -4, 4, -5, 3, -5, -1, 1, -3, -3, 0, 0}; {4, -2, 3, 3, -3, 1, -2, -3, -5, 0, 0, 0}; {4, -1, 5, 6, 1, -5, 5, 5, 5, -1, 0, 0}; {1, -5, 0, 0, 6, -1, -3, -4, 6, 0, 0, 0}; {3, -2, 4, 5, 0, -5, 4, 5, 5, -1, 0, 0}; {0, 6, -1, -1, 5, -1, -4, -5, -5, 0, 0, 0}; {1, -5, 0, 0, -5, 0, -3, -4, -5, 1, 0, 0}; {0, 6, -1, -1, 6, 0, -4, -4, -5, 0, 0, 0}; {-4, 1, 5, 4, -2, 4, 0, -2, -3, 1, 0, 0}; {6, -1, 3, 2, -3, -4, 3, -2, 0, -1, 0, 0}; {-3, 2, 6, 5, 0, 5, 0, -2, -3, 2, 0, 0}; {-4, 1, 5, 4, -1, 4, 0, -3, -3, 2, 0, 0}; {-5, 3, -2, 1, 6, -4, 4, 0, -1, 0, 0, 0}; {-4, 5, 1, 5, 1, 6, -2, 0, -4, -3, 0, 0}; {-1, 4, -4, -4, 1, 5, 1, -1, -3, 1, 0, 0}; {-1, 5, -2, -1, 5, -1, -5, -5, 6, 0, 0, 0}; {-2, 3, -5, -5, 0, 5, 1, 0, -3, 2, 0, 0}; {-2, 3, -5, -5, 1, 4, 0, -2, -3, 0, 0, 0}; {-3, 2, 6, 6, 0, 4, 0, -3, -3, 1, 0, 0}; {-3, 3, -4, -3, 4, -3, 6, 6, 6, -2, 0, 0}; {-4, 1, 5, 5, -1, 4, -1, -2, -4, 1, 0, 0}; {-4, 1, 5, 5, -1, 4, 0, -2, -3, 1, 0, 0}; {-5, 0, 4, 4, -2, 3, -1, -3, -4, 1, 0, 0}; {5, -2, 2, 2, -4, 2, -2, -3, -5, 0, 0, 0}; {6, 0, 5, 6, 1, -4, 5, 6, 5, -2, 0, 0}; {1, 6, -2, -2, 5, 5, 1, -3, -1, -2, 0, 0}; {-2, -4, 5, -2, -2, 3, -4, 3, -5, 0, 0, 0}; {3, -5, -2, -3, 3, -5, 3, 0, -2, 2, 0, 0}; {5, -1, 4, 5, 1, -5, 5, 5, 4, -2, 0, 0}; {4, -3, 1, 1, -4, 1, -3, -3, -5, 0, 0, 0}; {0, 0, -1, 6, -3, 1, -4, 6, -1, -5, 0, 0}; {-4, 6, 3, -4, -3, 1, 6, 1, 6, 0, 0, 0}; {-3, -5, 4, -2, 2, -1, 1, 1, 3, -5, 0, 0}; {-3, 5, 0, 4, -1, 1, 2, -4, -3, 1, 0, 0}; {4, -1, 5, -4, 2, 4, -5, 6, 1, -1, 0, 0}; {4, 0, -5, -1, 6, -2, 1, 3, -2, -2, 0, 0}; {-5, 2, -4, -1, 6, -5, 6, 4, -5, -5, 0, 0}; {5, -2, 2, 3, -4, 2, -2, -2, -4, 0, 0, 0}; {4, 1, -3, 2, 0, 1, -4, -2, 5, -4, 0, 0}; {4, -2, 3, 5, 0, 0, -2, -5, -3, -3, 0, 0}; {3, -3, 2, 4, -1, -1, -3, 6, -3, -3, 0, 0}; {3, -3, 2, 4, -1, -1, -3, 6, -3, -4, 0, 0}; {4, -1, 5, -4, 4, 5, 4, 2, -5, -4, 0, 0}; {6, 3, -1, 4, 2, -5, -1, 5, -3, 0, 0, 0}; {6, 3, -1, 4, 2, -5, -1, 6, -3, 1, 0, 0}; {5, -2, 2, 3, -3, 2, -2, -3, -4, 0, 0, 0}; {3, -4, 0, 1, -5, 1, -3, -3, -5, 0, 0, 0}; {-5, 5, 2, -3, 1, -2, 0, 0, 3, -5, 0, 0}; {0, -2, -5, 2, -5, -3, -3, 3, -4, 0, 0, 0}; {4, -2, 3, 6, -3, 5, 3, 3, -1, -3, 0, 0}; {5, 1, -4, 1, -4, -1, 1, 0, 3, 4, 0, 0}; {3, -1, 6, -1, 6, -3, 1, 2, -2, -2, 0, 0}; {3, -1, 6, -1, 6, -3, 2, 3, -2, -2, 0, 0}; {5, 0, 6, -2, 5, 6, 5, 3, -5, -5, 0, 0}; {6, 2, -3, 2, -2, 0, 0, 0, 4, 5, 0, 0}; {4, -1, 5, -3, 4, 5, 5, 3, 6, -5, 0, 0}; {3, -1, 6, -1, -5, -2, 0, 0, 3, 4, 0, 0}; {0, -5, 1, 5, 1, -1, 4, 5, -2, 0, 0, 0}; {-5, 3, -2, 3, 0, 1, 0, 0, 6, -5, 0, 0}; {3, -2, 4, -4, 4, 5, 4, 3, 6, -5, 0, 0}; {2, -3, 3, -5, 3, 4, 3, 2, 6, -5, 0, 0}; {0, 6, -1, 2, -3, -3, -5, 5, -4, -4, 0, 0}; {1, -4, 2, 6, 2, 3, 3, 2, 6, 6, 0, 0}; {2, -3, 3, -5, 3, 4, 4, 2, 6, 6, 0, 0}; {4, 1, -3, 3, 1, 5, -3, 4, -5, 0, 0, 0}; {1, -5, 0, 3, -1, -2, -4, 6, -3, -4, 0, 0}; {2, -3, 3, -5, 4, 4, 2, 6, -5, 0, 0, 0}; {3, 0, -4, 2, 1, 4, -3, 3, -5, 0, 0, 0}; {1, -4, 2, 6, 3, 4, 2, 2, 6, -5, 0, 0}; {-2, 3, -5, -3, 4, 3, 0, -3, -2, -2, 0, 0}; {-1, 5, -2, 1, -3, -3, -5, 5, -4, -4, 0, 0}; {3, 0, -4, 2, 1, 4, -4, 3, 6, 0, 0, 0}; {4, 2, -1, 6, 6, -2, 3, -1, 3, -2, 0, 0}; {2, -1, -5, 1, 0, 4, -4, 3, 6, 0, 0, 0}; {5, 0, 6, -1, -3, 5, 2, 1, -2, 0, 0, 0}; {-2, 5, -1, 4, 2, 1, 2, 1, 5, -5, 0, 0}; {-4, 2, -5, -1, -4, -5, 6, 4, -5, -4, 0, 0}; {6, -1, 3, 6, 2, 0, -2, -4, -2, -3, 0, 0}; {3, 6, -4, -3, 3, -1, -5, 4, 1, 2, 0, 0}; {-5, 1, 6, -2, -5, -5, 6, 3, -5, -5, 0, 0}; {6, 0, 5, -3, 6, 6, 5, 3, -5, -4, 0, 0}; {-3, 3, -4, 0, -2, -4, -5, 4, -4, -4, 0, 0}; {0, -4, 3, -3, -1, -2, 5, -5, -1, 2, 0, 0}; {4, -2, 3, -5, -4, 4, 3, -5, 6, 0, 0, 0}; {4, -2, 3, -5, -4, 5, 4, 3, -2, -4, 0, 0}; {-3, 5, 0, 6, -3, -4, 4, 6, -2, 1, 0, 0}; {6, 2, -3, 3, -5, 5, 6, -2, 2, 4, 0, 0}; {5, 0, 6, -1, 2, 0, -1, 2, 4, 5, 0, 0}; {5, 1, -4, 2, 6, 5, 6, -3, 1, 3, 0, 0}; {5, 0, 6, -1, 2, 0, -3, -2, -3, -5, 0, 0}; {3, 0, -4, 3, -3, -2, -1, 5, -3, 1, 0, 0}; {6, 3, -1, 6, 1, 5, -4, -4, 0, 2, 0, 0}; {1, -4, 2, -5, 0, -3, -3, 0, 6, 6, 0, 0}; {-1, -5, 2, -4, 2, 2, 3, -4, -1, 2, 0, 0}; {-5, 2, -4, 1, -5, -5, 5, 4, -5, -5, 0, 0}; {3, -2, 4, -3, 3, 3, 6, -5, 1, 1, 0, 0}; {4, -1, 5, -2, 4, 5, 4, 3, 6, 6, 0, 0}; {5, 0, 6, -1, 5, 6, 6, 4, 6, -5, 0, 0}; {3, -1, 6, 0, -5, -2, -1, -1, 3, 4, 0, 0}; {3, -1, 6, 0, -5, -2, 0, 0, 3, 4, 0, 0}; {1, -4, 2, -5, 2, 1, 5, 6, 0, 1, 0, 0}; {2, -2, 5, -1, -5, -2, -1, -1, 3, 4, 0, 0}; {0, -5, 1, 6, 1, 3, 3, 2, 5, 6, 0, 0}; {4, -1, 5, -2, 6, 6, 4, 3, -5, -5, 0, 0}; {2, -3, 3, -4, 4, 5, 3, 2, 6, 6, 0, 0}; {1, -4, 2, -5, 3, 4, 3, 2, -5, -5, 0, 0}; {-2, 4, -3, 1, -4, -4, -5, 5, -5, -4, 0, 0}; {-1, 6, 0, 5, 1, 2, 2, 1, 5, 6, 0, 0}; {0, -4, 3, -3, 6, -3, 0, 6, -4, 1, 0, 0}; {1, -2, 6, 1, -1, 3, -5, 2, 5, -1, 0, 0}; {-3, 3, -4, 0, -5, -4, -5, 5, -5, -4, 0, 0}; {3, -3, 2, 6, 2, -1, 4, 4, 5, 5, 0, 0}; {5, 0, 6, -1, -4, -5, 0, 0, 3, 4, 0, 0}; {1, -4, 2, -5, 4, 4, 3, 2, 6, -5, 0, 0}; {-1, 5, -2, 2, -2, -3, -5, 5, -4, -4, 0, 0}; {-2, 4, -3, 1, -3, -4, -5, 5, -4, -4, 0, 0}; {-3, 3, -4, 0, -4, -4, 6, 5, -5, -4, 0, 0}; {-4, 2, -5, -1, -5, -5, 6, 4, -5, -4, 0, 0}; {-2, 6, 1, -5, 5, -4, -2, 5, -5, 1, 0, 0}; {-2, -5, 3, -2, -3, 1, 5, 1, 4, -1, 0, 0}; {-2, 6, 1, -5, 5, -3, -1, 6, -4, 1, 0, 0}; {0, -5, 1, -5, 4, 4, 2, 2, 6, -5, 0, 0}; {-5, 2, -4, 2, -1, 0, 1, 0, 4, 5, 0, 0}; {-3, 5, 0, -5, 5, -5, -1, 5, -4, 0, 0, 0}; {-5, 1, 6, -1, -5, -5, 6, 4, -5, -5, 0, 0}; {4, -2, 3, -4, 4, 5, 5, 2, -4, -5, 0, 0}; {6, 2, -3, 4, 2, 5, -3, 4, 6, 0, 0, 0}; {-5, 1, 6, -1, -4, 6, 6, 4, -5, -4, 0, 0}; {-5, 2, -4, 2, 0, 0, 1, 0, 4, 6, 0, 0}; {-4, 3, -3, 3, 1, 1, 0, 1, 5, -5, 0, 0}; {6, 1, -5, 1, -1, 0, 1, -1, 4, 5, 0, 0}; {4, -2, 3, -4, 5, 5, 5, 3, 6, -5, 0, 0}; {4, -2, 3, -4, 5, 6, 5, 2, -5, -5, 0, 0}; {3, -3, 2, -5, 4, 5, 5, 2, 6, 6, 0, 0}; {5, 1, -4, 3, 2, 5, -3, 4, 6, 0, 0, 0}; {6, 1, -5, 1, 0, -1, 0, 0, 5, -5, 0, 0}; {-1, 2, 4, 6, 1, -3, 5, 4, 0, 2, 0, 0}; {5, 0, 6, 0, 1, -5, -1, -2, -4, -3, 0, 0}; {6, 2, -3, 4, -5, 6, 6, -2, 3, 5, 0, 0}; {4, -1, 5, -1, 1, -1, -1, 1, 5, 5, 0, 0}; {5, 1, -4, 3, 6, 5, 6, -2, 1, 4, 0, 0}; {-4, 4, -1, 6, -3, -4, 3, 5, -2, 1, 0, 0}; {3, -2, 4, -2, 0, -1, -2, 0, 6, 6, 0, 0}; {3, -2, 4, -2, 0, -1, -2, 1, 4, 5, 0, 0}; {3, -1, 6, 1, 5, -2, 2, 4, 5, 4, 0, 0}; {5, 1, -4, 3, -5, 5, 6, -2, 3, 4, 0, 0}; {1, -4, 2, -4, -1, -3, -3, -1, 6, 6, 0, 0}; {1, -4, 2, -4, -1, -3, -2, 0, 4, 4, 0, 0}; {0, -5, 1, -5, -2, -3, -3, -2, 6, 6, 0, 0}; {-4, 3, -3, 3, -5, -5, -5, -3, 6, 5, 0, 0}; {-1, 6, 0, 6, -2, -4, -4, 0, 4, 5, 0, 0}; {0, -5, 1, -5, -1, -3, -3, 0, 3, 4, 0, 0}; {0, -5, 1, -5, -1, -3, -3, 0, 4, 5, 0, 0}; {-1, 6, 0, 6, -2, -4, -3, -1, 6, 6, 0, 0}; {1, -4, 2, -4, 1, 4, 4, 2, 5, 6, 0, 0}; {0, -5, 1, -5, 1, 3, 4, 2, 5, 6, 0, 0}; {0, -4, 3, -2, 5, -4, -2, -2, 2, 3, 0, 0}; {-2, 5, -1, 5, 0, 2, 3, 1, 4, 5, 0, 0}; {-2, 5, -1, 5, 0, 2, 3, 1, 5, 6, 0, 0}; {-2, 4, -3, 2, -3, -4, 6, 5, -5, -5, 0, 0}; {-4, 3, -3, 3, -1, 1, 2, 1, 4, 5, 0, 0}; {-4, 4, -1, 6, 3, 6, -3, 4, 6, 0, 0, 0}; {0, 5, -3, 2, -4, 4, 0, -4, -5, -3, 0, 0}; {6, 0, 5, -1, 6, 6, 6, 4, 6, -5, 0, 0}; {-5, 1, 6, 0, -5, -5, 5, 4, -5, -5, 0, 0}; {5, -1, 4, -2, 5, 6, 6, 4, 6, -5, 0, 0}; {4, -2, 3, -3, 4, 5, 5, 3, 6, 6, 0, 0}; {5, 0, 6, 1, -3, -1, 0, -1, 4, 5, 0, 0}; {6, 2, -3, 5, 2, 5, -4, 4, 6, 0, 0, 0}; {4, -1, 5, 0, -4, -2, 0, -1, 3, 4, 0, 0}; {5, 0, 6, 1, -3, -1, 2, -5, -3, 1, 0, 0}; {3, -3, 2, -4, 3, 5, 5, 2, 6, 6, 0, 0}; {4, -2, 3, -3, 5, 5, 4, 3, 6, -5, 0, 0}; {4, -2, 3, -3, 5, 6, 5, 3, -5, -5, 0, 0}; {2, -3, 3, -2, -5, -3, 0, 0, 2, 4, 0, 0}; {2, -4, 1, -5, 3, 5, 4, 2, 6, 6, 0, 0}; {1, -5, 0, 6, 2, 4, 4, 1, 5, 5, 0, 0}; {1, -5, 0, 6, 2, 4, 4, 1, 6, 6, 0, 0}; {4, 0, -5, 3, 1, 5, -4, 3, 5, 0, 0, 0}; {3, -2, 4, -1, -4, -1, 1, -5, -3, 1, 0, 0}; {6, 1, -5, 2, 0, 0, 0, 5, -5, 0, 0}; {4, -2, 3, -3, 6, 5, 5, 3, -5, -4, 0, 0}; {3, -3, 2, -4, 5, 4, 4, 3, 6, -5, 0, 0}; {1, -5, 0, 6, 3, 3, 3, 2, 5, -5, 0, 0}; {2, -4, 1, -5, 4, 5, 4, 2, -5, -5, 0, 0}; {3, -1, 6, 2, 1, 4, -5, 3, 5, -1, 0, 0}; {3, -2, 4, -1, 0, -5, -2, -3, -5, -3, 0, 0}; {2, -3, 3, -2, -1, 6, -3, -4, -5, -4, 0, 0}; {6, -3, -1, 2, -1, 5, 2, 3, 0, 4, 0, 0}; {5, -4, -2, 1, -2, 5, 2, 3, 0, 4, 0, 0}; {1, 2, 2, 3, -2, 4, -1, -3, 4, 6, 0, 0}; {2, -3, 3, -2, 0, 6, -3, -3, -5, -4, 0, 0}; {0, -5, 1, -4, -2, -3, -3, -1, 5, 6, 0, 0}; {-2, 5, -1, 6, -3, -5, -4, -1, 5, 6, 0, 0}; {-4, 1, 5, -2, -1, -4, 4, -3, -5, 0, 0, 0}; {-3, 3, -4, 2, 4, 2, 1, 3, 6, 6, 0, 0}; {-1, 6, 0, -5, -2, -3, -3, -1, 4, 5, 0, 0}; {-2, 5, -1, 6, -3, -4, -3, -1, 4, 4, 0, 0}; {-2, 5, -1, 6, -3, -4, -3, -2, 5, 5, 0, 0}; {6, 0, 5, -1, 1, -1, 0, 0, -5, -5, 0, 0}; {5, -1, 4, -2, 0, -2, 0, 0, -5, -5, 0, 0}; {-4, 3, -3, 4, -4, -5, -5, -2, 5, 5, 0, 0}; {6, 1, -5, 2, 6, 6, -5, -3, 5, 5, 0, 0}; {0, -4, 3, -1, 4, -3, 1, 4, 4, 4, 0, 0}; {-1, -5, 2, -2, 3, -4, 0, 3, 3, 3, 0, 0}; {-3, 4, -2, 5, -3, -5, -4, -1, 3, 4, 0, 0}; {6, 1, -5, 2, -5, 6, 6, -1, 2, 4, 0, 0}; and {-1, 6, 0, -5, 0, 2, 3, 1, 4, 5, 0, 0}.

The first sequence set may further include some or all of the following 3922 sequences (which are marked as seq21_rm). PAPRs of sequences corresponding to these sequences are less than 2.1 dB, but a value of a cross-correlation with an LTE sequence is relatively large. These sequences belong to suboptimal sequences. The 3922 sequences are as follows:

{-1, 6, 1, -4, 3, 2, 2, -5, -2, 1, 0, 0}; {-2, 4, -2, 4, -2, -3, 4, 3, -1, -1, 0, 0}; {2, -4, 2, -4, 2, 3, -4, -3, 1, 1, 0, 0}; {1, 6, -1, 4, -3, -2, -2, 5, 2, -1, 0, 0}; {6, -1, 4, -3, 3, 0, -1, 0, -3, -4, 0, 0}; {-4, 2, -4, 2, -3, -4, 3, 3, -2, -1, 0, 0}; {-3, 3, -3, 3, -2, -3, 5, 5, -2, -1, 0, 0}; {-4, 2, -4, 2, -3, -4, 4, 4, -2, -1, 0, 0}; {0, 5, -2, 3, -3, -4, -1, -2, 4, 2, 0, 0}; {2, -4, 2, -4, 3, 4, 3, 2, 6, 6, 0, 0}; {-5, 1, -5, 1, -3, 6, 5, -2, 0, 2, 0, 0}; f 6, 0, 6, 0, -4, 5, 4, -2, 0, 2, 0, 0}; {5, -1, 5, -1, -5, 4, 3, -3, -1, 1, 0, 0}; {5, -1, 5, -1, -5, 6, 3, 3, -3, -2, 0, 0}; {-3, 2, -5, 0, -5, -5, -5, 3, -1, -3, 0, 0}; {-2, 4, -2, 4, 0, 2, 2, 0, 6, 6, 0, 0}; {4, -3, 2, -5, 3, -1, -5, 6, -5, -5, 0, 0}; {4, -3, 2, -5, 3, -1, -4, 6, -5, -4, 0, 0}; {4, -2, 4, -2, -5, 4, 3, -3, -1, 1, 0, 0}; {2, -5, 0, 5, 1, -2, 3, 3, 5, 4, 0, 0}; {1, -5, 1, -5, 4, 4, 3, 2, 6, -5, 0, 0}; {-2, 4, -2, 4, 1, 2, 2, 1, 5, 6, 0, 0}; {-2, 5, 0, -5, 5, -5, -1, 5, -5, 0, 0, 0}; {-3, 3, -3, 3, 0, 2, 2, 0, 5, 5, 0, 0}; {-3, 3, -3, 3, 0, 2, 2, 0, 6, 6, 0, 0}; {-4, 2, -4, 2, -1, 1, 1, -1, -5, -5, 0, 0}; {-4, 2, -4, 2, 0, 2, 1, 0, 6, 6, 0, 0}; {-5, 1, -5, 1, -1, 1, 1, 0, 5, 5, 0, 0}; {6, 1, -4, 3, 2, 6, -4, 3, 5, 0, 0, 0}; {6, 1, -4, 3, 2, -2, -1, 6, -4, -1, 0, 0}; {4, -3, 2, -5, 4, -1, -5, 5, 1, 1, 0, 0}; {-2, 4, -2, 4, 2, 2, 2, 1, 5, -5, 0, 0}; {-2, 4, -2, 4, 2, 3, 2, 1, 6, 6, 0, 0}; {5, -2, 3, -4, 5, 5, 5, 3, -5, -5, 0, 0}; {4, -2, 4, -2, -3, -1, -1, -1, 5, 5, 0, 0}; {-1, 6, 1, -4, -4, 2, 5, -3, -1, 0, 0, 0}; {-2, 3, -4, 1, -1, 4, 3, 6, 5, 2, 0, 0}; {-2, 3, -4, 1, -1, 4, 3, 6, 5, 3, 0, 0}; {1, 6, -1, 4, 2, -4, 5, 5, 6, 5, 0, 0}; {-1, 4, -3, 2, 0, -2, -4, 5, -3, -3, 0, 0}; {-1, 5, -1, 5, 4, 3, 3, 1, 6, -5, 0, 0}; {-5, 0, 5, -2, -4, 6, 6, 4, -4, -4, 0, 0}; {-2, 5, 0, -5, -4, 2, 4, -3, -1, 0, 0, 0}; {-3, 4, -1, 6, -5, 1, 4, -3, -2, 0, 0, 0}; {-2, 3, -4, 1, 0, 4, 2, 5, 5, 2, 0, 0}; {-3, 2, -5, 0, -1, 3, 2, 5, 4, 3, 0, 0}; {4, -1, 6, 1, 2, -3, -1, -4, -4, -3, 0, 0}; {3, -2, 5, 0, 1, -4, -2, -4, -5, -3, 0, 0}; {-3, 2, -5, 0, -1, 4, 2, 4, 5, 3, 0, 0}; {-4, 1, 6, -1, -2, 3, 1, 4, 4, 3, 0, 0}; {2, -5, 0, 5, 4, -2, -4, 3, 1, 0, 0, 0}; {3, -2, 5, 0, 1, -3, -2, -5, -4, -3, 0, 0}; {2, -3, 4, -1, 0, -4, -2, -5, -5, -2, 0, 0}; {3, -4, 1, 6, 5, -1, -4, 3, 2, 0, 0, 0}; {5, 0, -5, 2, 4, 6, 6, -4,

4, 4, 0, 0}; {1, -5, 1, -5, -4, -3, -3, -1, 6, 5, 0, 0}; {1, -4, 3, -2, 0, 2, 4, -5, 3, 3, 0, 0}; {2, -3, 4, -1, 1, -4, -3, 6, -5, -3, 0, 0}; {2, -3, 4, -1, 1, -4, -3, 6, -5, -2, 0, 0}; {1, 6, -1, 4, 4, -2, -5, 3, 1, 0, 0, 0}; {-4, 2, -4, 2, 3, 1, 1, 1, -5, -5, 0, 0}; {5, -1, 5, -1, 1, -1, -1, 0, -5, -5, 0, 0}; {4, -2, 4, -2, 0, -2, -1, 0, 6, 6, 0, 0}; {-5, 2, -3, 4, -5, -5, -5, -3, 5, 5, 0, 0}; {2, -4, 2, -4, -2, -3, -2, -1, 6, 6, 0, 0}; {2, -4, 2, -4, -2, -2, -2, -1, -5, 5, 0, 0}; {-4, 3, -2, 5, -4, 1, 5, -5, -1, -1, 0, 0}; {6, -1, 4, -3, -2, 6, 4, -3, -5, 0, 0, 0}; {4, -2, 4, -2, 1, -1, -1, 1, 5, 5, 0, 0}; {5, 0, -5, 2, 6, 5, 6, -3, 4, 4, 0, 0}; {3, -3, 3, -3, 0, -2, -2, 0, 6, 6, 0, 0}; {2, -5, 0, 5, -5, 5, 1, -5, 5, 0, 0, 0}; {-1, 5, -1, 5, -4, -4, -3, -2, 6, 5, 0, 0}; {-2, 5, 0, -5, -1, 2, -3, -3, -5, -4, 0, 0}; {6, -1, 4, -3, -1, 1, 0, -5, 4, 0, 0, 0}; {-4, 2, -4, 2, 5, -4, -3, 3, 1, -1, 0, 0}; {-4, 3, -2, 5, -3, 1, 4, 6, 5, 4, 0, 0}; {-4, 3, -2, 5, -3, 1, 5, 6, 5, 5, 0, 0}; {2, -4, 2, -4, 0, -2, -2, 0, 6, 6, 0, 0}; {2, -4, 2, -4, 0, -2, -2, 0, -5, -5, 0, 0}; {3, -2, 5, 0, 5, 5, 5, -3, 1, 3, 0, 0}; {-5, 1, -5, 1, 5, 6, -3, -3, 3, 2, 0, 0}; {-5, 1, -5, 1, 5, -4, -3, 3, 1, -1, 0, 0}; {5, -1, 5, -1, 3, 6, -5, 2, 0, -2, 0, 0}; {-2, 4, -2, 4, -3, -4, -3, -2, 6, 6, 0, 0}; {0, -5, 2, -3, 3, 4, 1, 2, -4, -2, 0, 0}; {4, -2, 4, -2, 3, 4, -4, -4, 2, 1, 0, 0}; {3, -3, 3, -3, 2, 3, -5, -5, 2, 1, 0, 0}; {4, -2, 4, -2, 3, 4, -3, -3, 2, 1, 0, 0}; {6, 1, -4, 3, -3, 0, 1, 0, 3, 4, 0, 0}; {-5, 1, -5, 2, -5, 6, 6, -4, 6, 5, 0, 0}; {-3, 3, -3, 4, -3, -4, -4, -1, 3, 4, 0, 0}; {5, -1, 5, 0, 5, 5, -5, -4, 5, 5, 0, 0}; {0, 6, 0, -5, 0, 1, 6, 6, 1, 1, 0, 0}; {1, -5, 1, -4, 1, 2, -5, -4, 1, 1, 0, 0}; {0, 6, 0, -5, 1, 1, -5, -4, 0, 1, 0, 0}; {5, -1, 5, 0, -5, 5, 5, -3, 0, 2, 0, 0}; {-2, 3, -4, 2, -4, -5, -1, -1, 3, 2, 0, 0}; {-1, 5, -1, 6, 1, 1, 6, -4, 0, 1, 0, 0}; {-2, 3, -4, 2, -4, -5, 0, 0, 3, 2, 0, 0}; {5, -1, 5, 0, -5, -5, 4, 4, -3, -2, 0, 0}; {4, -2, 4, -1, 6, 6, 3, 3, -3, -2, 0, 0}; {3, -3, 3, -2, 5, 5, 2, 2, -3, -2, 0, 0}; {5, -2, 3, -3, 4, 6, 6, 1, -2, -4, 0, 0}; {3, -3, 3, -2, 6, 4, 3, -3, -1, 1, 0, 0}; {4, -3, 2, -4, 3, 0, -4, -5, 0, 0, 0, 0}; {3, -4, 1, -5, 2, 0, -5, 6, 0, 0, 0, 0}; {6, 0, 6, 1, -2, 0, 0, -1, -5, -5, 0, 0}; {-5, 1, -5, 2, -1, 1, 1, 0, 5, 6, 0, 0}; {6, 0, 6, 1, -2, 0, 1, 0, 4, 5, 0, 0}; {3, -4, 1, -5, 3, 5, 5, 1, -4, -5, 0, 0}; {3, -4, 1, -5, 3, 5, 5, 1, -2, -4, 0, 0}; {2, -5, 0, 6, 3, 4, 4, 1, -3, -4, 0, 0}; {4, -3, 2, -4, 5, -1, -2, 3, 2, 1, 0, 0}; {1, 6, -1, 5, 2, -3, -5, 2, 1, 1, 0, 0}; {0, 5, -2, 4, 1, -3, 2, 3, 5, 4, 0, 0}; {-5, -1, 3, -4, 4, 0, 5, 5, 6, 4, 0, 0}; {2, -4, 2, -3, -4, -1, -1, -1, 4, 4, 0, 0}; {-5, 0, 5, -1, -3, 2, 1, 4, 4, 2, 0, 0}; {5, -3, 1, 6, 3, -5, 6, -3, 6, 3, 0, 0}; {2, 6, -2, 3, 1, 6, 2, 6, 5, 2, 0, 0}; {0, 4, -4, 1, -1, 4, 1, 6, 4, 3, 0, 0}; {1, -5, 1, -4, -4, 3, 2, -3, -1, -1, 0, 0}; {-3, 1, 5, -2, -4, 1, -2, 5, 2, 2, 0, 0}; {0, 6, 0, -5, -4, -4, -3, -1, 6, 6, 0, 0}; {6, 0, 6, 1, 2, -4, -1, -2, -4, -3, 0, 0}; {-1, 4, -3, 3, 4, 2, 1, 3, -3, -4, 0, 0}; {1, -5, 1, -4, -2, -3, -2, -1, 6, 6, 0, 0}; {0, 6, 0, -5, -3, -4, -3, -1, 6, 6, 0, 0}; {-1, 5, -1, 6, -4, -4, -3, -2, 6, 5, 0, 0}; {-1, 5, -1, 6, -4, -3, -3, -2, 6, 5, 0, 0}; {-4, 1, 6, 0, 1, 1, 1, 1, -4, 6, 0, 0}; {-3, 3, -3, 4, 6, -5, -4, -2, 5, 4, 0, 0}; {5, -1, 5, 0, 2, 5, 0, -1, -4, -4, 0, 0}; {3, -3, 3, -2, 0, 5, -4, -3, 1, 0, 0, 0}; {-1, 5, -1, 6, -3, -5, -4, -2, 6, 6, 0, 0}; {1, -5, 1, -4, -1, -2, -2, -1, 6, 6, 0, 0}; {0, 6, 0, -5, -2, -3, -2, -2, 6, 5, 0, 0}; {-2, 4, -2, 5, -4, -5, -3, -2, 5, 5, 0, 0}; {-4, 2, -4, 3, 6, 6, -4, -3, 5, 5, 0, 0}; {-2,4,-2, 5, -4, -4, -3, -2, 5, 4, 0, 0}; {-2, 4, -2, 5, -4, -4, -3, -2, 6, 5, 0, 0}; {4, -3, 2, -4, -2, 0, 0, -5, 4, 0, 0, 0}; {3, -3, 3, -2, 1, 4, -3, -3, 3, 1, 0, 0}; {4, -2, 4, -1, 2, 6, -5, 1, 0, -2, 0, 0}; {-2, 4, -2, 5, -3, -4, -4, -2, 5, 5, 0, 0}; {-5, 1, -5, 2, 6, 6, -4, -3, 3, 3, 0, 0}; {5, -1, 5, 0, 4, 4,

-5, -4, 3, 3, 0, 0}; {2, -5, 0, 6, -3, -3, 1, 0, 5, 3, 0, 0}; {4, -3, 2, -4, -1, 0, -1, 6, 3, -1, 0, 0}; {3, -3, 3, -2, 2, 4, -4, -4, 2, 1, 0, 0}; {2, -4, 2, -3, 1, 3, -4, -4, 2, 1, 0, 0}; {4, -1, 6, 2, -5, -1, 2, 5, 4, 3, 0, 0}; {4, -1, 6, 2, -5, -1, 3, 6, 5, 5, 0, 0}; {1, -5, 1, -4, 0, 4, 5, 1, -1, -3, 0, 0}; {-3, 3, -3, 5, -3, -4, -4, -2, 5, 5, 0, 0}; {-5, 1, -5, 3, -5, -5, -5, -3, 5, 5, 0, 0}; {1, 6, -1, 6, -3, -4, 0, -1, 5, 4, 0, 0}; {0, 5, -2, 5, -4, -4, 0, -1, 5, 3, 0, 0}; {-1, 5, -1, -5, -1, 1, -5, -5, 1, 1, 0, 0}; {-2, 3, -4, 3, 6, -5, 0, -1, 5, 2, 0, 0}; {-3, 2, -5, 2, 5, 6, -1, -2, 4, 2, 0, 0}; {1, -5, 1, -3, 1, 5, 6, 1, -1, -2, 0, 0}; {4, -3, 2, -3, 1, -2, -3, 0, -4, -5, 0, 0}; {4, -3, 2, -3, 1, -1, -2, 0, -5, 6, 0, 0}; {4, -4, 0, 6, -3, 6, 3, -4, 6, 0, 0, 0}; {-3, 3, -3, 5, -2, 2, 4, -4, 6, 5, 0, 0}; {2, -4, 2, -2, 4, 5, 2, 2, -3, -2, 0, 0}; {-4, 1, 6, 1, 6, -4, -3, 3, 1, -1, 0, 0}; {5, -2, 3, -2, 4, 6, -5, 2, 0, -2, 0, 0}; {4, -3, 2, -3, 3, 6, -5, 1, -1, -3, 0, 0}; {0, 5, -2, 5, -1, -4, -5, -3, -5, 6, 0, 0}; f 2, -5, 0, -5, 1, -1, -5, 6, 0, 0, 0, 0}; {2, -4, 2, -2, 5, 5, 2, 2, -3, -2, 0, 0}; {-4, 1, 6, 1, -5, 6, -1, -1, 2, 2, 0, 0}; {-5, 0, 5, 0, 6, 5, -2, -1, 2, 2, 0, 0}; {-4, 1, 6, 1, -5, -5, -2, -2, 3, 2, 0, 0}; {-5, 0, 5, 0, 6, 6, -1, -1, 2, 1, 0, 0}; {3,-4, 1, -4, 3, 5, 6, 1, -1, -3, 0, 0}; {2, -5, 0, -5, 2, 5, 5, 0, -4, -5, 0, 0}; {-1, 4, -3, 4, -1, -4, 6, 0, 1, 2, 0, 0}; {6, -1, 4, -1, 6, 5, -3, -3, 2, 2, 0, 0}; {2, 6, -2, 4, -2, -3, 2, 1, 4, 1, 0, 0}; {-4, 2, -4, 4, 0, 1, 2, -4, -2, 2, 0, 0}; {5, -2, 3, -2, 5, 5, -3, -3, 2, 1, 0, 0}; {6, -1, 4, -1, -5, 5, -2, 0, 2, 2, 0, 0}; {-2, 2, 6, 0, -4, -3, -4, 3, 0, -3, 0, 0}; {-1, 4, -3, 4, 1, 3, 3, 0, -3, -4, 0, 0}; {0, 6, 0, -4, 6, -2, -1, -1, 3, 4, 0, 0}; {3, -5, -1, 5, 2, -5, 5, -5, 6, 4, 0, 0}; {-4, 1, 6, 1, 0, 1, 2, 1, 6, 5, 0, 0}; {2, 6, -2, 4, 2, 6, 4, 6, 6, 4, 0, 0}; {2, 6, -2, 4, 2, 6, 5, 6, 6, 4, 0, 0}; {5, -1, 5, 1, 1, -4, -1, -3, -4, -3, 0, 0}; {1, -4, 3, 0, 2, 5, 5, -5, 2, 3, 0, 0}; {2, -4, 2, -2, -1, 6, -3, -3, -5, -4, 0, 0}; {0, 5, -2, 5, 5, -1, 1, 0, -3, -2, 0, 0}; {2, -4, 2, -2, 0, 3, -3, -3, -5, 6, 0, 0}; {-4, 0, 4, -2, -1, -4, 4, -3, -5, 0, 0, 0}; {-2, 4, -2, 6, -3, -4, -3, -2, 5, 5, 0, 0}; {-1, 6, 1, -2, 2, 2, 4, -5, 3, 4, 0, 0}; {3, -2, 5, 2, 6, -2, 3, 5, 4, 4, 0, 0}; {2, -3, 4, 1, 5, -2, 3, 5, 5, 5, 0, 0}; {-1, 4, -3, 4, 6, -2, -2, 4, 2, -1, 0, 0}; {-2, 5, 0, -2, 2, 2, 4, -5, 2, 3, 0, 0}; {6, -1, 4, 0, 3, -4, -4, 2, 0, -2, 0, 0}; {3, -4, 1, -3, 0, -1, -1, 0, 6, 5, 0, 0}; {3, -3, 3, 0, 4, 4, 6, -4, 4, 4, 0, 0}; {-4, 1, 6, 2, 5, 6, -1, -2, 4, 2, 0, 0}; {3, -3, 3, 0, 5, 3, 4, -5, 5, 4, 0, 0}; {-3, 4, -1, -3, 3, -5, -3, -4, 1, 2, 0, 0}; {4, -3, 2, -2, 2, 4, -3, -3, 3, 1, 0, 0}; {4, -2, 4, 1, -5, -2, 0, -2, 2, 3, 0, 0}; {0, 5, -2, 6, -1, -3, -5, -3, -5, 6, 0, 0}; {-2, 2, 6, 1, -5, -5, 0, 0, 3, 1, 0, 0}; {1, 5, -3, 4, -2, -4, 1, 1, 3, 2, 0, 0}; {2, 6, -2, 5, -1, -3, 1, 1, 4, 2, 0, 0}; {-5, 0, 5, 1, 1, -4, 0, -2, -5, -3, 0, 0}; {0, 6, 0, -3, -2, 4, -3, -4, 6, -4, 0, 0}; {-3, 2, -5, 3, 3, -3, 1, -1, -4, -2, 0, 0}; {5, 2, -1, -1, 4, -5, -1, -5, 0, -2, 0, 0}; {4, 0, -4, -4, 2, -3, 1, 2, 4, -1, 0, 0}; {3, -1, -5, -5, 1, -4, 0, 2, 4, -1, 0, 0}; {2, -2, 6, 6, 0, -5, -1, 1, 3, -1, 0, 0}; {6, 1, -4, -5, 0, -1, 3, 6, 2, 2, 0, 0}; {-2, 5, 0, -1, 5, -1, 2, 4, 5, 0, 0, 0}; {-1, 3, -5, 3, 6, 0, -2, 4, 1, -1, 0, 0}; {6, -2, 2, -2, 2, 0, -2, 0, -4, 6, 0, 0}; {4, -4, 0, -4, 2, 0, -4, 2, 3, 2, 0, 0}; {1, 6, -1, -4, 4, 2, -5, -2, 1, 0, 0, 0}; {-1, 4, -3, 6, 2, 0, 6, -3, 0, 0, 0, 0}; {-3, 1, 5, 1, -4, 6, -2, 1, 2, 1, 0, 0}; {-2, 3, -4, 5, 1, 1, 5, -2, -1, -2, 0, 0}; {-4, -1, 2, -3, 4, 1, -4, 4, 5, 1, 0, 0}; {-1, 2, 5, 0, -5, 0, -3, -2, -4, 6, 0, 0}; {-5, 0, 5, 2, 1, -4, 0, -2, -4, -3, 0, 0}; {6, -1, 4, 1, 0, -4, 0, -3, -4, -3, 0, 0}; {4, 0, -4, -3, 2, -3, 1, 2, 5, 0, 0, 0}; {-2, 5, 0, 0, 5, -1, 3, 4, 5, 0, 0, 0}; {5, 1, -3, -2, 4, 4, -3, 1, -1, -1, 0, 0}; {4, 0, -4, -3, 3, 4, -4, 1, -2, 0, 0, 0}; {1, -4, 3, 3, -4, -4, 1, 4, 0, 0, 0, 0}; {-2, 5, 0, 0, 6, -1, 3, 3, 5, 1, 0, 0}; {-3, 4, -1, -1, 5, -2, 2, 3, 4, 0, 0, 0}; {-4, 2, -4, -5, 0, 5, -4, -5, -5, 2, 0, 0}; {-4, 2, -4, -5, 0, 5, -4, -5, -5, 1, 0, 0}; {-4, 3, -2, -2, 4, -2, 2, 3, 4, -1, 0, 0}; {-3, 4, -1, -1, 5, -1, 2, 3, 5, 0, 0, 0}; {-4, 3, -2, -2, 4, -1, 2, 3, 5, 0, 0, 0}; {6, 1, -4, -4, 2, -2, 1, 2, 4, -1, 0, 0}; {5, -1, 5, 4, -2, 4, 6, 6, -5, 1, 0, 0}; {6, 1, -4, -4, 3, -2, 1, 2, 4, -1, 0, 0}; {2, 5, -4, 4, -4, 6, 0, 6, 5, 2, 0, 0}; {3, -4, 1, -1, 6, 5, 2, -3, 0, 0, 0, 0}; {2, 6, -2, -5, 1, 0, -5, 2, 2, 2, 0, 0}; {0, 3, 6, 2, -5, 5, -1, 5, 4, 3, 0, 0}; {0, 3, 6, 2, -5, 5, -1, 5, 5, 3, 0, 0}; {1, 5, -3, 6, 0, -1, 6, 1, 2, 1, 0, 0}; {1, 5, -3, 6, 0, -1, 6, 1, 2, 2, 0, 0}; {0, 3, 6, 2, -5, 5, -1, 5, 5, 2, 0, 0}; {0, 4, -4, 5, -1, -2, 5, 0, 2, 1, 0, 0}; {0, 3, 6, 2, -5, 5, -1, 6, 4, 3, 0, 0}; {-2, 1, 4, 0, 5, 3, -3, 4, 4, 2, 0, 0}; {-2, 1, 4, 0, 5, 3, -2, 4, 5, 3, 0, 0}; {-2, 1, 4, 0, 6, 3, -2, 4, 4, 3, 0, 0}; {-4, -1, 2, -2, 4, 2, -3, 3, 4, 2, 0, 0}; {6, -4, -2, 5, -2, -5, 1, -5, -5, 4, 0, 0}; {-5, -2, 1, -3, 3, 1, -4, 3, 4, 2, 0, 0}; {4, 6, -4, 3, -4, 5, 0, 6, -5, 3, 0, 0}; {2, 4, 6, 1, -5, 4, -1, 5, 6, 2, 0, 0}; {2, 4, 6, 1, -5, 4, -1, 5, 6, 3, 0, 0}; {1, 3, 5, 0, 6, 3, -2, 5, 6, 2, 0, 0}; {5, 4, 3, -4, 2, 5, -1, 6, 4, -3, 0, 0}; {0, -2, -4, 0, 6, -2, 2, -5, 6, -2, 0, 0}; {-1, -3, -5, -1, 6, -4, 1, -5, 6, -4, 0, 0}; {-2, -4, 6, -2, 5, -5, 1, -5, 6, -3, 0, 0}; {0, -1, -2, 3, -1, 3, -3, 3, 4, -5, 0, 0}; {-4, 5, 2, 5, -1, 1, 5, -2, -4, -1, 0, 0}; {-5, 4, 1, 4, -2, 0, 5, -2, -4, -2, 0, 0}; {-4, 6, 4, -4, 3, 6, 0, 6, 6, -4, 0, 0}; {-4, 6, 4, -4, 3, 6, 0, 6, 6, -3, 0, 0}; {-3, -5, 5, -3, 4, -5, 1, 6, 6, -4, 0, 0}; {6, 3, 0, 3, -3, 0, 4, -3, -4, -1, 0, 0}; {5, -1, 5, 5, -3, 3, 6, 6, 6, 0, 0, 0}; {5, -1, 5, 5, -3, 3, -5, 6, 6, 1, 0, 0}; {-5, 5, 3, -5, 3, 5, -1, 5, 6, -4, 0, 0}; {-5, 5, 3, -5, 3, 5, -1, 6, 5, -4, 0, 0}; {5, 2, -1, 2, -3, -2, 4, -3, -4, -3, 0, 0}; {6, 4, 2, 6, 2, 4, -1, 5, 6, -4, 0, 0}; {4, 1, -2, 1, -4, -3, 3, -4, -4, -3, 0, 0}; {4, 1, -2, 1, -4, -3, 3, -4, -3, -3, 0, 0}; {4, 1, -2, 1, -4, -3, 3, -3, -4, -2, 0, 0}; f 2, -2, 6, -4, 2, 2, -4, 0, -2, -2, 0, 0}; {4, 2, 0, 4, 0, 3, -2, 4, 6, -4, 0, 0}; {1, -3, 5, -5, 1, 2, -5, 0, -2, -1, 0, 0}; {0, -4, 4, 6, 0, 1, 6, -1, -2, 0, 0, 0}; {1, -3, 5, -5, 1, 2, -4, 0, -2, -2, 0, 0}; {5, 0, -5, -4, 2, -2, 0, 2, 4, -1, 0, 0}; {2, -4, 2, 2, -5, 2, 5, 5, 6, 1, 0, 0}; {-3, -1, 1, -3, -2, 2, -3, 4, -4, 4, 0, 0}; {0, -4, 4, 6, 1, 1, -5, 0, -2, -1, 0, 0}; {-3, 3, -3, -3, 2, 0, 5, -5, 3, 1, 0, 0}; {4, 2, 0, 4, 2, -1, 3, -4, 5, -4, 0, 0}; {2, -1, -4, -1, -4, 4, -5, 0, -4, -3, 0, 0}; {1, -5, 1, 1, -5, 1, 4, 4, 6, 0, 0, 0}; {-1, 5, -1, -1, 5, -1, -4, -4, 6, 0, 0, 0}; {-2, 1, 4, 1, 4, -4, 5, 0, 4, 3, 0, 0}; {3, -3, 3, 3, -2, 0, -5, 5, -3, -1, 0, 0}; {0, 4, -4, 6, -1, -1, 5, 0, 2, 1, 0, 0}; {3, 1, -1, 3, 2, -2, 3, -4, 4, -4, 0, 0}; {-2, 4, -2, -2, 5, -2, -5, -5, 6, -1, 0, 0}; {-5, 0, 5, 4, -2, 2, 0, -2, -4, 1, 0, 0}; {-1, 3, -5, 5, -1, -2, 4, 0, 2, 2, 0, 0}; {0, 4, -4, 6, 0, -1, 6, 1, 2, 0, 0, 0}; {-1, 3, -5, 5, -1, -2, 5, 0, 2, 1, 0, 0}; {-4, -2, 0, -4, 0, -3, 2, -4, 6, 4, 0, 0}; {-2, 2, 6, 4, -2, -2, 4, 0, 2, 2, 0, 0}; {-4, -1, 2, -1, 4, 3, -3, 3, 4, 2, 0, 0}; {-4, -1, 2, -1, 4, 3, -3, 4, 4, 3, 0, 0}; {6, -4, -2, 6, -2, -4, 1, -5, 6, 4, 0, 0}; {-5, -2, 1, -2, 3, 2, -4, 3, 4, 3, 0, 0}; {5, -5, -3, 5, -3, -5, 1, -5, 6, 4, 0, 0}; {5, -5, -3, 5, -3, -5, 1, 6, -5, 4, 0, 0}; {-5, 1, -5, -5, 3, -3, 5, 6, 6, -1, 0, 0}; {-5, 1, -5, -5, 3, -3, 6, 6, 6, 0, 0, 0}; {6, -3, 0, -3, 3, 0, -4, 3, 4, 1, 0, 0}; {4, 6, -4, 4, -3, 6, 0, 6, 6, 4, 0, 0}; {5, -4, -1, -4, 2, 0, -5, 2, 4, 2, 0, 0}; {3, 5, -5, 3, -4, 5, -1, 6, 6, 4, 0, 0}; {4, -5, -2, -5, 1, -1, -5, 2, 4, 1, 0, 0}; {0, 1, 2, -3, 1, -3, 3, -3, -4, 5, 0, 0}; {2, 4, 6, 2, -5, 5, -1, 5, 6, 3, 0, 0}; {1, 3, 5, 1, 6, 4, -1, 5, 6, 4, 0, 0}; {0, 2, 4, 0, 6, 2, -2, 5, 6, 2, 0, 0}; {-5, -4, -3, 4, -2, -5, 1, 6, -4, 3, 0, 0}; {-1, -3, -5, 0, 6, -3, 2, -5, 6, -2, 0, 0}; {-2, -4, 6, -1, 5, -4, 1, -5, 6, -3, 0, 0}; {-2, -4, 6, -1, 5, -4, 1, -5, 6, -2, 0, 0}; {-4, 6, 4, -3, 4, -5, 0, 6, 5, -3, 0, 0}; {5, 2, -1, 3, -3, -1, 4, -3, -4, -2, 0, 0}; {6, 4, 2, -5, 2, 5, -1, 5, 5, -4, 0, 0}; {4, 1, -2, 2, -4, -2, 3, -3, -4, -2, 0, 0}; {2, -1, -4, 0, 6, -3, 2, -4, -4, -3, 0, 0}; {2, -1, -4, 0, -5, -3, 2, -4, -5, -3, 0, 0}; {2, -1, -4, 0, -5, -3, 3, -4, -4, -2, 0, 0}; {0, -3, 6, -2, 5, -5, 1, 6, -4, -3, 0, 0}; {0, -4, 4, -5, 1, 2, -5, 0, -2, -1, 0, 0}; {-1, -5, 3, 6, 0, 1, 6, -1, -2, -1, 0, 0}; {0, -3, 6, -2, 5, -5, 1, -5, -5, -3, 0, 0}; {0, -3, 6, -2, 5, -5, 1, -5, -5, -2, 0, 0}; {0, -3, 6, -2, 5, -5, 1, -5, -4, -3, 0, 0}; {-2, 6, 2, 5, -1, 0, 5, -2, -2, -2, 0, 0}; {-3, 4, -1, 1, 6, -5, -2, 3, 0, 0, 0, 0}; {-2, -5, 4, -4, 4, 6, 0, 6, -5, -2, 0, 0}; {6, -1, 4, 4, -3, 2, -1, -2, -4, 1, 0, 0}; {-5, 1, -5, -4, 2, -4, 6, 6, 5, -1, 0, 0}; {6, -1, 4, 4, -2, 2, -1, -2, -4, 1, 0, 0}; {4, -3, 2, 2, -4, 2, -2, -3, -4, 1, 0, 0}; {4, -3, 2, 2, -4, 2, -2, -2, -4, 1, 0, 0}; {4, -2, 4, 5, 0, -5, 4, 5, 5, -2, 0, 0}; {4, -2, 4, 5, 0, -5, 4, 5, 5, -1, 0, 0}; {3, -4, 1, 1, -5, 1, -2, -3, -5, 0, 0, 0}; {3, -4, 1, 1, -5, 2, -2, -3, -4, 0, 0, 0}; {2, -5, 0, 0, 6, 1, -3, -3, -5, -1, 0, 0}; {-1, 4, -3, -3, 4, 4, -1, -4, 0, 0, 0, 0}; {-4, 0, 4, 3, -3, -4, 4, -1, 2, 0, 0, 0}; {-5, -1, 3, 2, -4, -4, 3, -1, 1, 1, 0, 0}; {2, -5, 0, 0, -5, 1, -3, -4, -5, 0, 0, 0}; {5, 0, -5, -2, -1, 4, 0, 2, 4, 3, 0, 0}; {6, 1, -4, -1, 0, 4, 0, 3, 4, 3, 0, 0}; {4, 1, -2, 3, -4, -1, 4, -4, -5, -1, 0, 0}; {-1, 6, 1, 4, -4, -2, 5, 2, -1, 0, 0, 0}; {1, -4, 3, 6, -2, 0, 6, 3, 0, 0, 0, 0}; {2, -3, 4, -5, -1, -1, -5, 2, 1, 2, 0, 0}; {3, -1, -5, -1, 4, 6, 2, -2, -1, 0, 0, 0}; {-4, 4, 0, 4, -2, 0, 4, -2, -3, -2, 0, 0}; {6, 2, -2, 2, -2, 0, 2, 0, 4, 6, 0, 0}; {1, -3, 5, -3, 6, 0, 2, -4, -1, 1, 0, 0}; {2, -5, 0, 1, -5, 1, -2, -4, -5, 0, 0, 0}; {6, -1, 4, 5, 0, 1, -3, 6, -2, -2, 0, 0}; {-4, 0, 4, 4, -2, 3, -1, -2, -4, 1, 0, 0}; {2, -5, 0, 2, -2, -2, -4, 5, -2, -3, 0, 0}; {-5, -2, 1, 1, -4, 5, 1, 5, 0, 2, 0, 0}; {5, 0, -5, -1, -1, 4, 0, 2, 5, 3, 0, 0}; {3, -2, 5, -3, -3, 3, -1, 1, 4, 2, 0, 0}; {4, 1, -2, 4, 6, 2, 4, 5, 4, -3, 0, 0}; {1, -4, 3, -5, -4, 2, -1, 0, 3, 2, 0, 0}; {-1, -5, 3, -4, 2, 4, -1, -1, -3, -2, 0, 0}; {-2, 6, 2, -5, 1, 3, -1, -1, -4, -2, 0, 0}; {2, -2, 6, -1, 5, 5, 0, 0, -3, -1, 0, 0}; {-4, 2, -4, -1, 5, 2, 0, 2, -2, -3, 0, 0}; {0, -5, 2, 6, 1, 3, 5, 3, 5, 6, 0, 0}; {-4, 3, -2, 2, -2, -4, 3, 3, -3, -1, 0, 0}; {3, -4, 1, 3, -3, 5, 3, 4, -1, -2, 0, 0}; {-3, 3, -3, 0, -5, -3, -4, 5, -5, -4, 0, 0}; {4, -1, 6, -2, -5, 6, 1, 2, -4, -2, 0, 0}; {-3, 3, -3, 0, -4, -4, 6, 4, -4, -4, 0, 0}; {-3, 4, -1, 3, 0, 1, 1, 0, 6, -5, 0, 0}; {6, 1, -4, 0, -3, 4, 4, -2, 0, 2, 0, 0}; {-1, 5, -1, 3, -1, -5, 6, -1, 1, 2, 0, 0}; {3, -2, 5, -2, -5, 6, 1, 2, -4, -2, 0, 0}; {2, -3, 4, -3, 6, 5, 0, 1, -5, -2, 0, 0}; {1, -5, 1, 5, 1, -1, 5, 5, -1, -1, 0, 0}; {0, -5, 2, -5, 4, 4, 0, 1, -5, -3, 0, 0}; {5, -1, 5, -3, 5, 5, 5, 3, -5, -5, 0, 0}; {-1, 6, 1, 6, 3, 4, 0, 1, -5, -4, 0, 0}; {4, -2, 4, -4, 4, 5, 4, 2, -4, -4, 0, 0}; {3, -3, 3, -5, 3, 4, 4, 2, -5, -5, 0, 0}; {1, -4, 3, -4, 6, 2, 2, -4, -2, 1, 0, 0}; {-2, 3, -4, -1, -5, 2, -3, -5, -5, -5, 0, 0}; {-3, 2, -5, -2, 6, 2, -3, -5, -4, -4, 0, 0}; {3, -3, 3, -5, 4, 4, 4, 2, -5, -5, 0, 0}; {1, 6, -1, 2, -2, -2, -4, 5, -3, -4, 0, 0}; {2, -4, 2, 6, 3, 4, 3, 2, -5, -5, 0, 0}; {-2, 4, -2, 2, 0, -3, 3, 3, 5, 6, 0, 0}; {-1, 6, 1, 6, 6, 0, -2, 0, 3, 1, 0, 0}; {-2, 4, -2, 2, 1, 6, 3, 3, 5, 4, 0, 0}; {0, -5, 2, -5, -5, 1, -1, 0, 3, 2, 0, 0}; {-3, 3, -3, 1, 0, 6, 3, 3, 5, 4, 0, 0}; {-1, 4, -3, 0, -2, -5, -5, 5, -2, -3, 0, 0}; {-5, 1, -5, -1, -1, 4, 1, 3, 4, 3, 0, 0}; {-2, 6, 2, -4, -2, 6, -5, 6, 6, -4, 0, 0}; {-2, 6, 2, -4, -2, 6, -4, 6, 6, -4, 0, 0}; {4, -1, 6, -1, 0, -1, -2, -1, 6, -5, 0, 0}; {-3, 5, 1, -2, 5, -5, 5, 6, -4, 0, 0, 0}; {0, 6, 0, 4, 6, 2, 1, 1, -3, -4, 0, 0}; {3, -1, -5, 1, 5, 4, 5, -3, 0, 3, 0, 0}; {1, -4, 3, -4,

-1, -3, -3, 0, 3, 4, 0, 0}; {2, -2, 6, 0, 4, 3, 4, -3, 0, 3, 0, 0}; {6, 1, -4, 1, 5, -5, 2, 0, -2, -2, 0, 0}; {1, -3, 5, -1, 4, 3, 3, -4, -1, 2, 0, 0}; {0, -4, 4, -2, 3, 2, 3, -4, -1, 2, 0, 0}; {-2, 6, 2, -4, 2, 3, -2, -1, -4, -1, 0, 0}; {-5, 2, -3, 2, -5, -5, 3, 3, -2, -1, 0, 0}; {4, -2, 4, -4, 0, -1, -2, 4, 2, -2, 0, 0}; {6, 1, -4, 1, 6, -5, 3, 3, -2, -2, 0, 0}; {1, -4, 3, -4, 1, 4, 6, 0, -1, -2, 0, 0}; {-2, 5, 0, 5, -2, -5, -5, 0, 4, 5, 0, 0}; {-3, 4, -1, 4, -3, -5, 6, -1, 1, 3, 0, 0}; {-4, 2, -4, 0, 4, 1, 0, 1, -3, -4, 0, 0}; {-5, 2, -3, 2, -4, 6, 5, -2, 0, 2, 0, 0}; {6, 1, -4, 1, -5, -5, 2, 2, -2, -1, 0, 0}; {5, 0, -5, 0, 6, 6, 1, 1, -2, -1, 0, 0}; {4, -1, 6, -1, 5, 5, 2, 2, -3, -2, 0, 0}; {-2, 4, -2, 2, -5, -5, -2, -2, 3, 2, 0, 0}; {5, 0, -5, 0, 6, -5, 2, 1, -2, -2, 0, 0}; {4, -1, 6, -1, 5, 6, 1, 1, -2, -2, 0, 0}; {-2, 5, 0, 5, -1, 1, 5, 6, 0, 0, 0, 0}; {0, -5, 2, -5, 1, 4, 5, 3, 5, 6, 0, 0}; {-4, 3, -2, 3, -3, 6, 5, -1, 1, 3, 0, 0}; {4, -1, 6, -1, 6, 4, 3, -3, -1, 1, 0, 0}; {-2, 4, -2, 2, -4, -5, -2, -2, 3, 2, 0, 0}; {3, -3, 3, -5, 2, -2, -4, 4, 6, -5, 0, 0}; {-4, 3, -2, 3, -1, 1, 2, 0, 5, 6, 0, 0}; {-4, 4, 0, 6, 3, 6, -3, 4, 6, 0, 0, 0}; {-4, 3, -2, 3, -1, 2, 3, 0, 4, 5, 0, 0}; {0, 6, 0, 5, 0, -1, 6, 6, -1, -1, 0, 0}; {-1, 5, -1, 4, -1, -2, 5, 4, -1, -1, 0, 0}; {-5, 1, -5, 0, -5, -5, 5, 4, -5, -5, 0, 0}; {3, -3, 3, -4, 3, 4, 4, 1, -3, -4, 0, 0}; {5, -1, 5, -2, 5, 6, 6, 4, 6, -5, 0, 0}; {-1, 5, -1, 4, 0, -4, -5, -1, 1, 3, 0, 0}; {-4, 1, 6, -2, 5, 1, -3, 6, -5, -5, 0, 0}; {-4, 1, 6, -2, 5, 1, -2, -5, -4, -3, 0, 0}; {-3, 3, -3, 2, -2, -4, 4, 4, -2, -1, 0, 0}; {-4, 3, -2, 4, 1, 0, 1, 6, -3, 1, 0, 0}; {-2, 5, 0, 6, 3, 3, -1, 0, -5, -3, 0, 0}; {-5, 1, -5, 0, -4, -4, 5, 4, -3, -3, 0, 0}; {5, -1, 5, -2, 6, 6, 4, 3, -3, -3, 0, 0}; {2, -4, 2, -5, 3, 4, 4, 2, -5, -5, 0, 0}; {-4, 2, -4, 1, -2, 6, 5, -1, 0, 2, 0, 0}; {-3, 3, -3, 2, -1, -4, 3, 3, -3, -1, 0, 0}; {-4, 3, -2, 4, 2, 0, 0, 5, -4, 0, 0, 0}; {2, -4, 2, -5, 4, 4, 3, 2, 6, -5, 0, 0}; {2, -4, 2, -5, 4, 4, 3, 2, -5, -4, 0, 0}; {0, 6, 0, 5, 2, 3, 2, 2, 6, -5, 0, 0}; {0, 6, 0, 5, 2, 3, 3, 1, 6, 6, 0, 0}; {-2, 3, -4, 0, -4, -4, -5, 4, -3, -4, 0, 0}; {-1, 5, -1, 4, 1, 2, 2, 1, 6, 6, 0, 0}; {1, -5, 1, 6, 3, 5, 4, 2, 6, 6, 0, 0}; {0, 6, 0, 5, 2, 4, 3, 1, 6, 6, 0, 0}; {-5, 1, -5, 0, -2, -5, 0, 1, 4, 4, 0, 0}; {3, -3, 3, -4, 6, 5, 4, 2, -5, -4, 0, 0}; {4, -1, 6, 0, -1, -1, -1, -1, 4, 6, 0, 0}; {1, -5, 1, 6, 4, 4, 3, 2, 6, -5, 0, 0}; {-1, 5, -1, 4, 2, 3, 2, 1, 6, 6, 0, 0}; {1, -4, 3, -3, -4, -2, -1, -3, 3, 4, 0, 0}; {-3, 3, -3, 2, 1, 6, 2, 3, 5, 4, 0, 0}; {6, 0, 6, -1, -2, 4, 1, 2, 4, 3, 0, 0}; {0, 6, 0, 5, 4, 4, 3, 1, 6, 6, 0, 0}; {-2, 6, 2, -3, -1, 6, -2, 6, -5, -2, 0, 0}; {3, -1, -5, 2, 4, -1, 2, -5, -2, -2, 0, 0}; {-1, 5, -1, 4, 4, -3, -2, 3, 1, 1, 0, 0}; {0, -4, 4, -1, 1, -4, -1, 6, -4, -3, 0, 0}; {5, 0, -5, 1, 3, -2, -1, -4, -4, -2, 0, 0}; {-5, 3, -1, 6, -3, 5, 6, 3, 6, -3, 0, 0}; {-2, 4, -2, 3, 4, 1, 1, 1, -4, -4, 0, 0}; {5, 1, -3, 4, -4, 0, -5, -5, 6, -4, 0, 0}; {0, -5, 2, -4, -1, 3, -2, -3, -5, -4, 0, 0}; {-1, 6, 1, -5, -2, 3, 5, -2, -1, -1, 0, 0}; {-4, 3, -2, 4, -5, 1, 2, -3, -2, -1, 0, 0}; {-2, 5, 0, 6, -3, -4, -4, -1, 3, 4, 0, 0}; {5, -1, 5, -2, 1, -1, -1, 0, -5, 6, 0, 0}; {6, 0, 6, -1, 2, 0, 0, 1, 5, 5, 0, 0}; {-3, 4, -1, 5, -3, -5, -5, -1, 2, 4, 0, 0}; {-3, 4, -1, 5, -3, -5, -5, -1, 4, 5, 0, 0}; {-5, 2, -3, 3, -4, 6, 6, -1, 2, 4, 0, 0}; {4, -2, 4, -3, 1, -1, -2, -1, -4, -5, 0, 0}; {-3, 4, -1, 5, -2, 0, 5, 6, 0, 0, 0, 0}; {-3, 3, -3, 2, 6, -4, -3, 3, 1, -1, 0, 0}; {-4, 3, -2, 4, -3, 0, 4, 5, 0, 0, 0, 0}; {-3, 3, -3, 2, -5, -5, -2, -2, 3, 2, 0, 0}; {-4, 2, -4, 1, 6, 6, -3, -3, 3, 2, 0, 0}; {-5, 1, -5, 0, 5, 5, -4, -4, 3, 2, 0, 0}; {2, -3, 4, -2, 4, 5, 0, 0, -3, -2, 0, 0}; {1, -5, 1, 6, -1, -1, 6, 4, 0, -1, 0, 0}; {2, -3, 4, -2, 4, 5, 1, 1, -3, -2, 0, 0}; {-5, 1, -5, 0, 5, -5, -5, 3, 0, -2, 0, 0}; {0, 6, 0, 5, -1, -1, 5, 4, 0, -1, 0, 0}; {-1, 5, 0, 5, -1, -3, -3, -1, -5, -5, 0, 0}; {-2, 4, -1, 4, -2, -3,

4, 3, -1, -1, 0, 0}; {-3, 3, -2, 3, -3, -3, 4, 3, -1, -1, 0, 0}; {2, -4, 3, -4, 2, 3, -5, -4, 1, 1, 0, 0}; {1, 6, 0, 4, -3, -2, -2, 4, 1, -2, 0, 0}; {-4, 2, -3, 2, -3, -4, 3, 3, -2, -1, 0, 0}; {6, 0, -5, 0, -5, -5, 2, 2, -2, -2, 0, 0}; {6, 0, -5, 0, -5, -5, 3, 2, -2, -2, 0, 0}; {6, 0, -5, 0, -4, -5, 3, 3, -3, -2, 0, 0}; {6, -1, 5, -3, 5, -5, 6, 3, -5, -5, 0, 0}; {-1, 5, 0, 5, 2, 3, 2, 1, 6, 6, 0, 0}; {-5, 0, 6, -2, 6, -5, 5, 3, -4, -4, 0, 0}; {6, -1, 5, -3, 5, 6, 5, 2, -3, -4, 0, 0}; {5, -2, 4, -4, 5, 6, 4, 2, -4, -4, 0, 0}; {-1, 5, 0, 5, 3, 3, 1, 1, -5, -4, 0, 0}; {-3, 2, -4, 0, -3, -4, 6, 4, -4, -4, 0, 0}; {-2, 4, -1, 4, 2, 3, 1, 1, 6, 6, 0, 0}; {2, -5, 1, 5, 3, -3, 5, 5, 6, 5, 0, 0}; {1, 6, 0, 4, 2, -3, 4, 4, 5, 5, 0, 0}; {-1, 4, -2, 2, 0, -4, 2, 3, 5, 4, 0, 0}; {3, -3, 4, -3, -3, 3, 0, 1, 3, 3, 0, 0}; {5, -2, 4, -4, -4, 0, 0, 5, 3, 2, 0, 0}; {5, 1, -2, 5, -4, 3, -5, 4, 6, -3, 0, 0}; {3, -5, 0, 3, 2, 6, 2, -4, 6, 2, 0, 0}; {4, -3, 3, -5, -4, 5, 4, 3, -2, -4, 0, 0}; {2, -5, 1, 5, 6, 3, 3, 3, -4, -5, 0, 0}; {-5, 1, -4, 1, 3, -5, -4, 2, 1, 0, 0, 0}; {6, 0, -5, 0, 2, -5, -5, 1, 1, 0, 0, 0}; {2, -5, 1, 5, -5, 4, 2, 6, 5, -1, 0, 0}; {2, -4, 3, -4, -1, -3, -2, -1, 5, 5, 0, 0}; {4, 0, -3, 4, -3, -1, 6, -4, 6, -2, 0, 0}; {0, 5, -1, 3, 5, 5, -1, 6, 3, 1, 0, 0}; {-1, 6, 2, -4, 0, 3, -2, -3, -4, -3, 0, 0}; {3, -2, 6, 0, 5, 4, 4, -3, 0, 3, 0, 0}; {1, -5, 2, -5, -1, -3, -3, -1, 6, 6, 0, 0}; {0, 6, 1, 6, -2, -2, 5, 2, 0, -1, 0, 0}; {-3, 3, -2, 3, -5, -4, 3, 1, -1, -2, 0, 0}; {6, 0, -5, 0, 4, -5, -4, 2, 0, -1, 0, 0}; {4, -2, 5, -2, 2, 5, -4, -4, 3, 1, 0, 0}; {0, 6, 1, 6, -1, -3, -3, -1, -5, -5, 0, 0}; {-2, 4, -1, 4, -3, -3, 4, 2, -1, -1, 0, 0}; {-3, 3, -2, 3, -4, -4, 4, 3, -1, -2, 0, 0}; {-5, 1, -4, 1, 6, -5, 2, 1, -2, -2, 0, 0}; {3, -4, 2, 6, -2, -1, -1, 5, 2, -1, 0, 0}; {4, -2, 5, -2, 3, 5, -5, 1, -1, -2, 0, 0}; {4, -2, 5, -2, 3, 6, -5, 2, 0, -2, 0, 0}; {-3, 3, -2, 4, -3, -4, -4, -2, 6, 6, 0, 0}; {5, -1, 6, 0, 5, 6, -5, -4, 6, 5, 0, 0}; {6, 1, -3, 4, -2, 0, 2, 4, 4, 3, 0, 0}; {0, 5, -1, 4, -4, -4, 2, 2, -1, -2, 0, 0}; {0, 5, -1, 4, -4, -2, -2, 5, 2, -1, 0, 0}; {-5, 1, -4, 2, -4, 6, 5, -2, 0, 2, 0, 0}; {-2, 3, -3, 2, -5, 6, -1, -1, 2, 2, 0, 0}; {6, 0, -5, 1, -5, -5, 2, 2, -2, -1, 0, 0}; {-5, 1, -4, 2, -4, -4, 4, 4, -2, -1, 0, 0}; {4, -3, 3, -4, 1, 0, -4, 6, 1, -1, 0, 0}; {-2, 3, -3, 2, -5, -5, -1, -1, 3, 2, 0, 0}; {-2, 3, -3, 2, -5, -3, -2, 4, 2, -1, 0, 0}; {4, -3, 3, -4, 2, 0, -5, 5, 1, 0, 0, 0}; {4, -2, 5, -1, 6, 6, 2, 2, -3, -2, 0, 0}; {3, -3, 4, -2, 5, 5, 1, 1, -3, -2, 0, 0}; {4, -2, 5, -1, 6, -5, 2, 2, -2, -2, 0, 0}; {6, 0, -5, 1, -4, -3, 4, 5, -2, -1, 0, 0}; {-3, 3, -2, 4, -1, 2, 3, 1, 4, 5, 0, 0}; {3, -4, 2, -5, 2, -1, -2, 0, -4, -4, 0, 0}; {2, -5, 1, 6, 1, -2, -3, -1, -4, -5, 0, 0}; {2, -4, 3, -3, 5, 5, 1, 1, -3, -2, 0, 0}; {-5, 1, -4, 2, -2, -1, 4, 5, -1, 0, 0, 0}; {5, -2, 4, -3, 4, 5, 5, 1, -2, -4, 0, 0}; {6, -1, 5, -2, 6, -5, 6, 4, -5, -5, 0, 0}; {4, -3, 3, -4, 4, 5, 4, 2, -5, -5, 0, 0}; {0, 6, 1, -5, 4, 2, 2, -5, -2, 1, 0, 0}; {0, 5, -1, 4, 0, -2, 6, 5, -1, -1, 0, 0}; {0, 5, -1, 4, 0, -1,6,5, -1, -1, 0, 0}; {6, 0, -5, 1, -1, 0, -1, 0, 6, -5, 0, 0}; {3, -4, 2, -5, 4, 4, 4, 2, -5, -5, 0, 0}; {3, -4, 2, -5, 4, 5, 4, 2, -5, -5, 0, 0}; {1, 6, 0, 5, 2, 3, 3, 1, -5, -5, 0, 0}; {1, 6, 0, 5, 2, 4, 3, 1, -5, -5, 0, 0}; {1, 6, 0, 5, 2, -3, 6, 4, 0, 0, 0, 0}; {-2, 3, -3, 2, -1, -4, 2, 3, 5, 4, 0, 0}; {-4, 1, -5, 0, -3, -4, 6, 4, -4, -4, 0, 0}; {-5, 1, -4, 2, 1, 1, 0, 0, 5, -5, 0, 0}; {4, -2, 5, -1, -2, 0, -1, -1, 5, 5, 0, 0}; {3, -3, 4, -2, -3, -1, -1, -2, 4, 5, 0, 0}; {-1, 4, -2, 3, 1, 2, 3, 0, -5, 6, 0, 0}; {-5, 0, 6, -1, -3, 1, 2, -5, 4, 2, 0, 0}; {6, -1, 5, -2, -4, 1, 1, 5, 4, 2, 0, 0}; {6, 0, -5, 1, 0, 6, -5, 1, 0, 0, 0, 0}; {6, -1, 5, -2, -4, 1, 2, 6, 4, 2, 0, 0}; {-2, 3, -3, 2, 0, -5, 2, 3, 5, 4, 0, 0}; {-2, 3, -3, 2, 0, -4, 2, 3, 5, 5, 0, 0}; {4, -3, 3, -4, -5, 5, 5, 3, -5, -5, 0, 0}; {-5, 2, -2, 5, 6, 0, 2, -4, -1, -1, 0, 0}; {-5, 2, -2, 5, 6, 0, 3, -4, -1, -1, 0, 0}; {5,

-2, 4, -3, -4, 0, 1, 5, 3, 1, 0, 0}; {5, -2, 4, -3, -4, 1, 0, 4, 4, 2, 0, 0}; {3, -5, 0, 4, 2, 6, 4, -4, 6, 3, 0, 0}; {-5, 1, -4, 2, 2, -4, -4, 0, 2, 0, 0, 0}; {6, 3, 1, -2, 2, -5, -2, -3, 1, -3, 0, 0}; {5, -2, 4, -3, -3, 0, 1, -5, 4, 1, 0, 0}; {4, -3, 3, -4, -4, 0, 0, 4, 3, 2, 0, 0}; {5, -1, 6, 0, 1, 6, -5, 0, 1, 0, 0, 0}; {4, -2, 5, -1, 0, 5, -5, 0, 0, 1, 0, 0}; {5, 0, -4, 3, 5, -1, 2, -4, -2, -1, 0, 0}; {0, 4, -3, 1, 0, 4, 1, -5, 5, 2, 0, 0}; {-1, 3, -4, 0, -1, 4, 0, 6, 5, 2, 0, 0}; {-2, 2, -5, -1, -2, 3, -1, 6, 4, 1, 0, 0}; {1, 6, 0, 5, 6, 3, 1, 6, 5, -1, 0, 0}; {4, -2, 5, -1, 1, 6, -5, 0, 0, -1, 0, 0}; {4, -2, 5, -1, 1, 6, -5, 0, 0, 0, 0, 0}; {3, -3, 4, -2, 0, 5, 6, 0, 0, -1, 0, 0}; {2, -5, 1, 6, -5, -1, -1, 4, 3, 2, 0, 0}; {-4, 0, 5, -3, -2, -4, 4, -3, 6, 1, 0, 0}; {-2, 4, -1, 5, -4, -4, -4, -2, 6, 5, 0, 0}; {4, -2, 5, -1, 2, 6, -5, 1, 0, -1, 0, 0}; {-3, 1, 6, -2, 0, -4, 5, -3, -5, 0, 0, 0}; {-1, 5, 0, 6, -2, -4, -4, -2, -5, 6, 0, 0}; {0, 6, 1, -5, -1, -3, -3, 0, 3, 4, 0, 0}; {-3, 2, -4, 1, 4, 2, 0, 5, 4, -1, 0, 0}; {-4, 1, -5, 0, 3, 1, -1, 5, 3, -1, 0, 0}; {-2, 4, -1, 5, -3, -4, -4, -2, 6, 5, 0, 0}; {-2, 4, -1, 5, -3, -4, -4, -2, 6, 6, 0, 0}; {-2, 4, -1, 5, -3, -4, -4, -1, 2, 4, 0, 0}; {-5, 1, -4, 2, 6, 6, -5, -4, 5, 5, 0, 0}; {6, 0, -5, 1, 5, 5, -5, -4, 4, 4, 0, 0}; {-2, 5, 1, -4, 1, 2, 3, 5, 4, 4, 0, 0}; {-4, 2, -3, 3, -5, -5, -5, -3, 6, 5, 0, 0}; {-5, 1, -4, 2, 6, -5, 2, 0, -2, -2, 0, 0}; {4, -2, 5, -1, 3, 5, 0, -1, -3, -3, 0, 0}; {2, -4, 3, -3, 1, 5, 6, 2, 0, -2, 0, 0}; {4, -3, 3, -3, 0, -2, -1, 0, -5, -5, 0, 0}; {4, -4, 1, 6, -4, 5, 2, -5, 5, 0, 0, 0}; {4, -4, 1, 6, -4, 5, 3, -5, 6, 0, 0, 0}; {-5, 1, -4, 3, -5, -5, -5, -3, 5, 5, 0, 0}; {6, 0, -5, 2, 6, 6, -5, -4, 5, 5, 0, 0}; {0, 5, -1, 5, -4, -4, -2, -2, 5, 4, 0, 0}; {1, -4, 4, 0, 5, -3, 1, 4, 3, 3, 0, 0}; {5, -2, 4, -2, 2, 0, -1, 0, -4, -5, 0, 0}; {4, -3, 3, -3, 1, -1, -2, 0, -4, -5, 0, 0}; {6, 0, -5, 2, -5, 6, -5, -3, 5, 5, 0, 0}; {0, 6, 1, -4, 1, 2, 5, 6, 4, 4, 0, 0}; {-2, 3, -3, 3, -5, -5, -2, -2, 4, 3, 0, 0}; {-3, 2, -4, 2, 6, 6, -3, -3, 4, 3, 0, 0}; {-5, -1, 4, -3, 0, 1, 1, -5, 4, 0, 0, 0}; {-4, 2, -3, 4, -3, 1, 2, 0, 3, 4, 0, 0}; {3, -4, 2, -4, 1, -1, -3, -2, -4, -5, 0, 0}; {3, -4, 2, -4, 1, -1, -2, -1, -4, -5, 0, 0}; {-5, 0, 6, 0, 5, 4, -2, -2, 2, 2, 0, 0}; {-4, 1, -5, 1, 6, 6, -2, -2, 3, 2, 0, 0}; {5, -2, 4, -2, 4, 4, -4, -5, 3, 1, 0, 0}; {1, 6, 0, 6, 0, 0, 6, 5, 1, 0, 0, 0}; {1, -5, 2, -3, 5, 3, 3, -4, -1, 1, 0, 0}; {-2, 3, -3, 3, -2, -3, 5, 4, -1, -1, 0, 0}; {5, -2, 4, -2, 5, 5, -4, -3, 2, 2, 0, 0}; {4, -3, 3, -3, 4, 4, -4, -4, 2, 1, 0, 0}; {2, -5, 1, -5, 3, 5, 4, 2, -5, -5, 0, 0}; {1, 6, 0, 6, 2, 4, 3, 1, -5, -5, 0, 0}; {1, 6, 0, 6, 2, 4, 4, 1, -5, -5, 0, 0}; {1, 6, 0, 6, 3, 4, 3, 2, -5, -5, 0, 0}; {0, 5, -1, 5, 2, 3, 3, 1, -5, -5, 0, 0}; {-2, 3, -3, 3, 0, 2, 2, 0, 6, 6, 0, 0}; {-2, 3, -3, 3, 0, 2, 2, 0, -4, -5, 0, 0}; {-5, -1, 4, -3, 5, 0, -4, -5, -5, -5, 0, 0}; {-5, 0, 6, 0, -3, 6, 0, 2, 4, 3, 0, 0}; {-2, 3, -3, 3, 1, 2, 2, 1, 6, 6, 0, 0}; {-5, -1, 4, -3, 6, 6, 6, 3, -2, -4, 0, 0}; f-1, 5, 0, -5, 6, -3, -3, -3, 4, 5, 0, 0}; {-4, 1, -5, 1, -1, 1, 1, 0, 6, 6, 0, 0}; {-1, 5, 0, -5, 6, -2, -2, 6, -5, 1, 0, 0}; {5, -2, 4, -2, -4, 1, 1, 4, 4, 2, 0, 0}; {4, -3, 3, -3, -5, 0, 0, 4, 4, 2, 0, 0}; {2, 6, -1, 4, 1, 5, 4, -4, 6, 3, 0, 0}; {3, -3, 4, -1, -2, 4, 6, -1, 0, 0, 0, 0}; {2, 6, -1, 4, 1, 5, 5, -3, 6, 3, 0, 0}; {3, -4, 2, -4, 6, -1, 0, 5, 3, 1, 0, 0}; {-2, 2, -5, 0, -3, 2, 0, 6, 4, 2, 0, 0}; {0, 6, 1, -4, -5, 2, 3, -2, -1, -1, 0, 0}; {-4, 1, -5, 1, 0, 5, 2, 3, 5, 4, 0, 0}; {-5, 0, 6, 0, -1, 4, 1, 2, 5, 3, 0, 0}; {4, -3, 3, -3, -4, 1, 0, 3, 4, 1, 0, 0}; {4, -3, 3, -3, -4, 1, 0, 3, 4, 2, 0, 0}; {2, 6, -1, 4, 2, 6, 4, -5, 6, 3, 0, 0}; {3, -4, 2, -4, -5, 0, -1, 3, 4, 1, 0, 0}; {3, -4, 2, -4, -5, 0, -1, 3, 4, 2, 0, 0}; {1, 5, -2, 3, 1, 5, 3, -5, 6, 3, 0, 0}; {1, 5, -2, 3, 1, 5, 4, 6, 5, 4, 0, 0}; {4, -2, 5, 0, 0, 6, -5, -1, 1, -1, 0, 0}; {4, -2, 5, 0, 0, 6, -5, -1, 1, 0, 0, 0}; {1, 5,

-2, 3, 1, 5, 4, -5, 5, 3, 0, 0}; {2, -5, 1, -5, 6, -1, -1, 3, 3, 1, 0, 0}; {2, -5, 1, -5, 6, -1, -1, 3, 3, 2, 0, 0}; {3, -3, 4, -1, -1, 5, -5, -1, 1, 0, 0, 0}; {0, 4, -3, 2, 0, 4, 4, -5, 5, 3, 0, 0}; {1, 6, 0, 6, 5, -2, -1, 3, 2, 2, 0, 0}; {2, -4, 3, -2, -2, 4, 6, -1, 0, 0, 0, 0}; {0, 4, -3, 2, 0, 4, 4, -4, 5, 2, 0, 0}; {1, 6, 0, 6, 5, -2, -1, 4, 2, 1, 0, 0}; {1, -5, 2, -3, -3, 3, 5, -1, -1, -1, 0, 0}; {1, -5, 2, -3, -3, 3, 6, -1, -1, 1, 0, 0}; {-3, 3, -2, 5, 5, 0, 2, -2, -3, -2, 0, 0}; {-1, 5, 0, -5, -4, -1, -3, -1, 4, 3, 0, 0}; {2,-5, 1, -5, -5, 0, -1, 2, 3, 2, 0, 0}; {1, 6, 0, 6, 6, -1, -2, 2, 3, 2, 0, 0}; {1, 6, 0, 6, 6, -1, -1, 3, 2, 2, 0, 0}; {2, -4, 3, -2, -1, 5, 6, -1, 0, -1, 0, 0}; {-1, 3, -4, 1, 0, 4, 3, 6, 5, 3, 0, 0}; {2, -4, 3, -2, -1, 5, 6, -1, 0, 0, 0, 0}; {0, 5, -1, 5, 5, -2, -2, 3, 2, 2, 0, 0}; {-2, 2, -5, 0, -1, 3, 2, -5, 4, 2, 0, 0}; {1, -4, 4, 0, 2, -3, 0, 6, -3, -2, 0, 0}; {0, 5, -1, 5, 5, -2, -1, 4, 2, 0, 0, 0}; {-3, 1, 6, -1, -2, 3, 0, 5, 4, 2, 0, 0}; {1, -5, 2, -3, -1, 3, -3, -4, 6, 6, 0, 0}; {-2, 3, -3, 3, 4, -3, -4, 1, 2, 2, 0, 0}; {0, 6, 1, -4, -2, 4, 5, -1, -1, -1, 0, 0}; {-5, 1, -4, 3, 6, 6, -5, -3, 5, 5, 0, 0}; {-5, 1, -4, 3, 6, -5, -5, -3, 5, 4, 0, 0}; {6, 0, -5, 2, 5, 6, -5, -4, 5, 4, 0, 0}; {-2, 3, -3, 3, 5, -3, -3, 4, 2, -1, 0, 0}; {-2, 3, -3, 3, 5, -2, -2, 3, 2, 0, 0, 0}; {6, -2, 3, -3, -2, 2, 1, 5, 3, 0, 0, 0}; {-5, 0, 6, 1, 3, -4, -4, 2, 1, -1, 0, 0}; {3, 6, -2, 3, 3, -1, -5, -1, -4, 1, 0, 0}; {4, -2, 5, 1, 4, 4, 6, -4, 4, 5, 0, 0}; {-4, 3, -1, -4, 0, 5, 2, 3, -2, 0, 0, 0}; {-3, 3, -2, 6, -3, 2, 6, -5, 6, 6, 0, 0}; {-3, 3, -2, 6, -3, 2, 6, -4, -4, -5, 0, 0}; {-5, 0, 6, 1, 4, -4, -4, 3, 1, -1, 0, 0}; {6, -1, 5, 0, 3, -5, -4, 3, 1, -2, 0, 0}; {6, 0, -5, 3, -5, 6, -5, -3, 5, 5, 0, 0}; {6, 0, -5, 3, -5, -5, -5, -3, 3, 4, 0, 0}; {2, -5, 1, -4, -1, -2, -2, -1, -5, 6, 0, 0}; {4, -2, 5, 1, 5, 5, -5, -4, 5, 4, 0, 0}; {2, -4, 3, -1, 3, 3, 5, -5, 4, 4, 0, 0}; {-3, 2, -4, 3, 6, 5, -2, -2, 3, 3, 0, 0}; {2, -5, 1, -4, -1, -1, -2, -1, -5, 6, 0, 0}; {6, 0, -5, 3, -4, 0, 1, -1, 3, 4, 0, 0}; {2, -5, 1, -4, 0, -2, -2, -1, -5, 6, 0, 0}; {-1, 4, -2, 5, -3, -4, -3, -2, 6, 6, 0, 0}; {-3, 2, -4, 3, -5, 6, -4, -3, 5, 5, 0, 0}; {6, -1, 5, 0, 4, 3, -3, -3, 2, 2, 0, 0}; {6, -1, 5, 0, 4, 4, -3, -3, 3, 2, 0, 0}; {-1, 4, -2, 5, -2, -4, -4, -2, 6, 6, 0, 0}; {1, -5, 2, -2, 4, 4, 4, -4, 0, 2, 0, 0}; {-4, 1, -5, 2, -5, 6, -4, -3, 5, 5, 0, 0}; {1, -5, 2, -2, 4, 5, 2, 3, -3, -1, 0, 0}; {6, -1, 5, 0, 5, 5, -3, -3, 3, 2, 0, 0}; {4, -3, 3, -2, 3, 3, -4, -4, 2, 2, 0, 0}; {4, -3, 3, -2, 3, 4, -3, -3, 2, 1, 0, 0}; {3, -4, 2, -3, 2, 3, -4, -4, 2, 1, 0, 0}; {-3, 1, 6, 0, 5, 2, 0, 1, -3, -4, 0, 0}; {-3, 2, -4, 3, -3, -5, -5, -3, 6, 6, 0, 0}; {-4, 1, -5, 2, -4, -5, -4, -2, 2, 3, 0, 0}; {6, -1, 5, 0, 6, 5, -5, -4, 5, 5, 0, 0}; {2, 6, -1, 5, -2, -4, 1, 0, 4, 3, 0, 0}; {1, 5, -2, 4, -3, -4, 1, 0, 4, 2, 0, 0}; {4, -3, 3, -2, 4, 4, -4, -4, 2, 2, 0, 0}; {2, 6, -1, 5, -2, -3, 0, -1, 5, 3, 0, 0}; {3, -4, 2, -3, 3, 3, -5, -5, 2, 2, 0, 0}; {-1, 3, -4, 2, -4, -5, 0, 0, 3, 2, 0, 0}; {3, -4, 2, -3, 4, 4, -5, -4, 1, 2, 0, 0}; {2, -5, 1, -4, 3, 3, -5, -5, 2, 1, 0, 0}; {1, 5, -2, 4, -2, -3, 0, 0, 4, 3, 0, 0}; {0, 5, -1, 6, 1, 2, 6, -5, 1, 1, 0, 0}; {0, 4, -3, 3, -3, -2, -3, 4, 1, -2, 0, 0}; {-2, 2, -5, 1, -5, -3, -3, 3, 1, -2, 0, 0}; {-5, -1, 4, -2, 4, 1, -1, 0, -3, -4, 0, 0}; {-5, 0, 6, 1, -4, 6, 5, -2, 0, 2, 0, 0}; {-3, 3, -2, 6, 2, 1, 2, -5, -2, 1, 0, 0}; {1, 5, -2, 4, -2, -4, 1, 1, 3, 3, 0, 0}; {-3, 3, -2, 6, 2, 2, 0, 1, -5, -2, 0, 0}; {4, -3, 3, -2, 5, 4, -4, -3, 2, 2, 0, 0}; {-1, 3, -4, 2, -3, -4, -1, -2, 4, 2, 0, 0}; {-4, 0, 5, -1, 6, -4, -4, 3, 1, -2, 0, 0}; {5, -2, 4, -1, -5, 5, 4, -3, 0, 1, 0, 0}; {-4, 0, 5, -1, -5, -4, -5, 3, 0, -3, 0, 0}; {-3, 3, -2, 6, 4, -4, -3, 5, 6, 0, 0, 0}; {6, -2, 3, -3, 5, -5, 5, 2, -2, -3, 0, 0}; {0, 5, -1, 6, 3, -3, -2, 3, 2, 1, 0, 0}; {-5, 0, 6, 1, -1, 1, 0, 0, -5, -5, 0, 0}; {2, -4, 3, -1, -2, 4, -5, -2, 0, 1, 0, 0}; {-2, 1, 5, -2, 6, -3, -2, -2,

5, 2, 0, 0}; f-1, 3, -4, 2, -1, 4, 3, 6, 5, 3, 0, 0}; {-1, 3, -4, 2, -1, 4, 4, -5, 5, 3, 0, 0}; {1, 5, -2, 4, 2, 6, 4, 6, 6, 3, 0, 0}; {2, -5, 1, -4, -5, 0, -1, 2, 4, 2, 0, 0}; {0, 4, -3, 3, 1, 5, 3, 6, 6, 2, 0, 0}; {3, -3, 4, 0, 0, 6, -5, -2, 1, 0, 0, 0}; {1, 6, 0, -5, 6, -1, -1, 2, 3, 0, 0, 0}; {-3, 0, 4, -3, 6, -3, -4, -1, -4, 4, 0, 0}; {1, 5, -2, 4, 2, -5, 4, 5, 6, 4, 0, 0}; {-1, 3, -4, 2, 0, 5, 3, 5, 5, 4, 0, 0}; {-1, 3, -4, 2, 0, 5, 3, 6, 5, 3, 0, 0}; {-2, 2, -5, 1, -1, 4, 2, 5, 5, 2, 0, 0}; {-2, 2, -5, 1, -1, 4, 2, 5, 5, 3, 0, 0}; {-2, 2, -5, 1, -1, 4, 3, 5, 5, 4, 0, 0}; {-2, 2, -5, 1, -1, 4, 3, 6, 5, 2, 0, 0}; {-5, 1, -4, 4, 4, -1, 2, -3, -3, -1, 0, 0}; {-3, 1, 6, 0, -1, 3, 2, 5, 5, 3, 0, 0}; {-5, -2, 2, -5, 5, -3, -5, -3, -5, 3, 0, 0}; {-5, -1, 4, -2, -2, 3, 2, 6, 4, 1, 0, 0}; {-3, 3, -2, 6, -4, -2, -4, -2, 4, 4, 0, 0}; {5, 3, 2, 3, -3, 1, -5, 2, -4, -4, 0, 0}; {2, 6, -1, 6, -5, 0, -1, 4, 2, 0, 0, 0}; {4, -3, 3, -1, 1, 2, -1, 0, -5, 6, 0, 0}; {4, -3, 3, -1, 2, -5, -5, 2, 0, -2, 0, 0}; {3, -3, 4, 1, 5, 4, 6, -4, 4, 4, 0, 0}; {-1, 2, 6, 0, 1, -3, 4, -3, 6, 0, 0, 0}; {3, -3, 4, 1, 5, 5, 6, -4, 4, 4, 0, 0}; {0, 6, 1, -2, 2, 2, 5, -5, 3, 3, 0, 0}; {0, 6, 1, -2, 2, 2, 5, -5, 4, 4, 0, 0}; {0, 4, -3, 4, -5, -4, 1, 0, 5, 2, 0, 0}; {1, 6, 0, -4, 0, 2, -4, -4, 2, 1, 0, 0}; {-3, 0, 4, -2, 0, -4, 3, -3, 6, 0, 0, 0}; {-1, 4, -2, 6, -2, -3, -4, -2, 6, 6, 0, 0}; {-2, 3, -3, 5, -3, -4, -4, -2, 6, 5, 0, 0}; {2, 6, -1, 6, -3, -4, 1, 0, 5, 3, 0, 0}; {2, -5, 1, -3, 1, 2, -4, -4, 2, 1, 0, 0}; {-3, 2, -4, 4, -3, -4, -5, -3, 6, 6, 0, 0}; {-5, -1, 4, -1, 3, 1, -1, 0, -3, -5, 0, 0}; {-3, 2, -4, 4, -3, -4, -4, -2, 6, 6, 0, 0}; {6, -2, 3, -2, 2, 0, -1, 0, -4, -5, 0, 0}; {0, 4, -3, 4, -4, -5, 0, -1, 4, 3, 0, 0}; {-1, 3, -4, 3, -4, -5, -1, -2, 4, 3, 0, 0}; {-2, 2, -5, 2, -5, 4, -1, -2, 2, 2, 0, 0}; {-2, 2, -5, 2, -4, 6, -1, -1, 3, 2, 0, 0}; {-4, -1, 3, -3, 2, 0, 4, 3, 5, 3, 0, 0}; {-1, 4, -2, 6, 1, 1, -5, -4, 0, 0, 0, 0}; {-3, 1, 6, 1, -5, -5, 0, -1, 3, 1, 0, 0}; {-3, 1, 6, 1, -5, -4, -3, 3, 1, -1, 0, 0}; {6, -2, 3, -2, 4, 1, -3, -4, 1, 1, 0, 0}; {0, 5, -1, -5, 3, 2, 6, -4, 1, 1, 0, 0}; {-3, 1, 6, 1, -4, -5, -2, -2, 3, 2, 0, 0}; {5, -3, 2, -3, 4, 6, 6, 1, -1, -4, 0, 0}; {6, -2, 3, -2, 5, -5, -5, 2, 0, -2, 0, 0}; {5, -3, 2, -3, 4, 6, -5, 2, 0, -2, 0, 0}; {-1, 3, -4, 3, 1, 5, 3, 5, 6, 3, 0, 0}; {-2, 2, -5, 2, 0, 5, 3, 5, 5, 4, 0, 0}; {-5, -2, 2, -4, 5, -3, 6, -4, -5, 4, 0, 0}; {-5,-2, 2, -4, 5, -3, -5, -4, -5, 5, 0, 0}; {5, -4, 0, 6, 3, -5, 5, -4, 6, 4, 0, 0}; {6,-3, 1, -5, 4, -4, -5, -4, -5, 4, 0, 0}; {5, -4, 0, 6, 3, -5, 6, -4, 6, 4, 0, 0}; {6, -2, 3, -2, -4, 1, 1, 4, 3, 3, 0, 0}; {5, -4, 0, 6, 4, -4, 6, -5, -5, 3, 0, 0}; {5, -4, 0, 6, 4, -4, 6, -5, -5, 4, 0, 0}; {4, -3, 3, 0, 0, -5, -1, -3, -5, -2, 0, 0}; {3, -4, 2, -1, -1, 6, -2, -3, -5, -3, 0, 0}; {1, 3, 6, 0, -3, 1, -2, -3, -3, 4, 0, 0}; {-3, 4, 0, -1, 4, -1, 2, 4, 5, 0, 0, 0}; {-1, 3, -4, 4, 6, 0, -2, 4, 1, -1, 0, 0}; {-5, -2, 2, -3, -1, -1, 4, 2, -5, 3, 0, 0}; {-4, 0, 5, 1, 4, -1, -3, 3, -1, -2, 0, 0}; {-4, 0, 5, 1, 4, -1, -3, 3, 0, -2, 0, 0}; {-5, -2, 2, -3, -1, 6, 2, -4, 4, 0, 0, 0}; {-3, 3, -2, -4, 1, 1, 3, 6, 2, 3, 0, 0}; {-5, -1, 4, 0, 5, 2, -2, -3, 1, 2, 0, 0}; {4, -4, 1, -3, 2, -1, -3, -2, -4, -5, 0, 0}; {5, -5, -2, 4, -2, 6, 1, -5, 6, 4, 0, 0}; {5, -4, 0, -5, 3, -4, 6, -4, 6, 5, 0, 0}; {6, -3, 1, -4, 5, -3, 6, -5, -5, 5, 0, 0}; {5, -4, 0, -5, 4, -4, 6, -5, -5, 4, 0, 0}; {-5, 2, -2, -2, 3, -2, 2, 2, 5, -1, 0, 0}; {-5, 2, -2, -2, 3, -2, 2, 3, 4, -1, 0, 0}; {-5, 2, -2, -2, 3, -2, 2, 3, 5, 0, 0, 0}; {6, 1, -3, -3, 2, -3, 1, 3, 4, -1, 0, 0}; {6, -2, 3, 0, 2, -2, -4, -1, -2, -5, 0, 0}; {5, 0, -4, -4, 2, -4, 1, 2, 4, -1, 0, 0}; {4, -2, 5, 4, -3, 3, 6, 5, 6, 0, 0, 0}; {4, -2, 5, 4, -3, 3, 6, 6, 6, 1, 0, 0}; {4, -2, 5, 4, -3, 3, 6, 6, -5, 1, 0, 0}; {5, 0, -4, -4, 2, -3, 1, 2, 4, 0, 0, 0}; {5, 0, -4, -4, 2, -3, 1, 2, 5, -1, 0, 0}; {4, -1, -5, -5, 1, -3, 0, 2, 4, -1, 0, 0}; {2, -4, 3, 2, -4, 2, 5, 5, 6, 1, 0, 0}; {1, -5, 2,

1, -5, 2, 4, 4, 6, 0, 0, 0}; {5, -3, 2, -1, 4, 1, -3, -3, 1, 2, 0, 0}; {4, -5, -1, -5, -1, -5, 2, 0, 4, 3, 0, 0}; {5, -5, -2, 5, -2, -5, 1, -5, 6, 4, 0, 0}; {-5, -2, 2, -2, 4, 2, -3, 3, 4, 2, 0, 0}; {4, 6, -3, 4, -3, 6, 1, 6, 6, 3, 0, 0}; {-1, 0, 2, -4, 1, -3, 3, -3, -4, 5, 0, 0}; {-5, 5, 4, -4, 3, 6, 0, 6, 5, -4, 0, 0}; {4, -1, -5, -4, 1, -5, 0, 2, 2, -2, 0, 0}; {1, -2, -4, -1, 6, -4, 2, -5, -4, -3, 0, 0}; {1, -2, -4, -1, 6, -4, 2, -4, -5, -3, 0, 0}; {1, -1, -2, 2, -2, 1, -3, 3, 6, -5, 0, 0}; {2, -4, 3, 3, -4, 2, 5, 5, 6, 1, 0, 0}; {3, -2, 6, -5, 1, -4, 0, 2, 3, -1, 0, 0}; {1, -5, 2, 2, -5, 1, 5, 5, 5, 0, 0, 0}; {0, 6, 1, 1, 6, 0, 4, 4, 5, -1, 0, 0}; {-1, 4, -2, -3, 1, -5, -3, -4, -4, 2, 0, 0}; {-3, 4, 0, 1, -5, 6, -1, 3, 0, -1, 0, 0}; {-5, 1, -4, -4, 1, -1, 5, -5, 2, 1, 0, 0}; {-2, -5, 5, -4, 4, 6, 0, 5, -4, -4, 0, 0}; {-2, 4, -1, -1, 5, 0, 3, 4, 5, 0, 0, 0}; {6, 0, -5, -5, 2, -4, 6, 6, 5, -1, 0, 0}; {-5, 4, 2, 5, 4, 0, 4, -3, 5, -4, 0, 0}; {3, 6, -2, -5, 1, 0, -5, 2, 3, 2, 0, 0}; {1, 3, 6, 2, -5, 5, -1, 5, 6, 3, 0, 0}; {-2, -1, 1, -4, 0, -3, 3, -4, -4, 5, 0, 0}; {0, 5, -1, -2, 6, -1, -4, -4, 6, -1, 0, 0}; {-2, 3, -3, -4, 4, -2, -5, -5, 6, -1, 0, 0}; {-1, 1, 4, 0, 6, 3, -2, 4, 5, 2, 0, 0}; {-3, -1, 2, -2, 4, 2, -3, 3, 5, 2, 0, 0}; {-5, -4, -2, 5, -2, -5, 1, -5, -5, 4, 0, 0}; f-5, -4, -2, 5, -2, -5, 1, -5, -5, 3, 0, 0}; f 4, 5, -5, 3, -4, 6, 0, 5, -5, -4, 0, 0}; {-4, -5, -5, 1, -3, 1, -5, 2, 2, -5, 0, 0}; {5, 3, 2, -5, 2, 6, -1, 5, 5, -4, 0, 0}; {2, -1, -3, 1, -5, -2, 3, -4, -5, -2, 0, 0}; {-3, 6, 4, -4, 3, 6, 0, 6, -5, -4, 0, 0}; {3, 1, 0, 5, 1, 4, -2, 4, 4, -4, 0, 0}; {1, -2, -4, 0, -5, -3, 2, -4, 6, -3, 0, 0}; {-5, 4, 2, 6, 2, 4, -1, 5, -5, -4, 0, 0}; {4, -1, -5, -3, 3, 3, -4, 1, -1, -1, 0, 0}; {4, -1, -5, -3, 3, 3, -3, 1, -2, -2, 0, 0}; {2, -4, 3, 4, -2, 6, 4, 5, 4, -2, 0, 0}; {1, 6, 0, 0, 6, 0, -3, -4, -5, 0, 0, 0}; {0, 5, -1, -1, 5, -1, -4, -4, 6, -1, 0, 0}; {1, -5, 2, 3, -2, 5, 3, 4, 4, -2, 0, 0}; {-3, 1, 6, 5, -2, 4, 0, -2, -3, 1, 0, 0}; {-2, 3, -3, -3, 4, -1, 6, -5, 6, 0, 0, 0}; {-4, 0, 5, 4, -2, 4, -1, -2, -4, 1, 0, 0}; {-3, 2, -4, -4, 3, -2, 6, -5, 6, -1, 0, 0}; {1, 6, 0, 0, -5, 0, -3, -4, -5, 0, 0, 0}; {-2, 2, -5, 6, 0, 5, 0, -1, -3, 1, 0, 0}; {-1, 4, -2, -2, 5, -1, -5, -5, -5, 0, 0, 0}; {-1, 4, -2, -2, 5, -1, -5, -4, -5, 0, 0, 0}; {-4, 0, 5, 4, -2, 3, -1, -2, -4, 0, 0, 0}; {-3, 1, 6, 5, -1, 4, 0, -1, -3, 1, 0, 0}; {-1, 5, 0, 1, -3, 4, 2, 4, 4, -2, 0, 0}; {-2, 3, -3, -3, 4, -2, -4, -5, 6, -1, 0, 0}; {-4, 0, 5, 4, -2, 3, 0, -2, -4, 1, 0, 0}; {-4, 0, 5, 4, -2, 3, 0, -2, -3, 1, 0, 0}; {0, 3, -5, 5, -1, -2, 5, 0, 3, 1, 0, 0}; {6, -3, 1, -1, 5, -4, 4, 1, -1, 2, 0, 0}; {3, 6, -2, -3, 3, -5, 3, 0, -2, 2, 0, 0}; {0, 4, -3, -3, 4, 4, 0, -4, 0, -1, 0, 0}; {4, 1, -1, 4, -2, 1, -3, 6, -4, -2, 0, 0}; {-1, 6, 2, 5, -3, -1, 5, 1, -1, 0, 0, 0}; {5, 3, 2, -4, 3, 6, 0, 5, 4, -3, 0, 0}; {4, 0, -3, 1, -5, -3, 3, -4, -3, -3, 0, 0}; {3, -2, 6, -3, 2, 3, -4, 1, -1, -1, 0, 0}; {1, -3, 6, -2, 6, -2, 1, 0, 2, 5, 0, 0}; {-4, 0, 5, 5, -2, 4, -1, -2, -4, 1, 0, 0}; {-5, -1, 4, 4, -3, 3, -1, -3, -4, 1, 0, 0}; {-4, 1, -5, -4, 2, -3, 6, 6, 5, -1, 0, 0}; {-5, -1, 4, 4, -2, 3, -1, -2, -4, 1, 0, 0}; {6, -2, 3, 3, -3, 2, -1, -2, -4, 1, 0, 0}; {-1, -5, 4, -3, 1, 5, -1, -4, -4, -2, 0, 0}; {-1, -5, 4, -3, 1, -5, 5, -5, -1, 1, 0, 0}; {-2, 5, 1, 5, -3, -2, 5, 1, 0, -1, 0, 0}; {-3, 3, -2, 1, 4, 5, -2, 5, 3, 1, 0, 0}; {-5, 1, -4, -1, 2, 3, -3, 4, 2, 1, 0, 0}; {-4, 3, -1, 3, -5, -3, 4, 0, 0, 0, 0, 0}; {6, 0, -5, -2, 1, 2, -4, 4, 1, 1, 0, 0}; {-5, 2, -2, 2, 6, -4, 3, 0, -1, -1, 0, 0}; {-4, 4, 1, 6, -1, 2, -2, -4, -4, -2, 0, 0}; {-4, 3, -1, 3, -4, -4, 2, 2, -1, 1, 0, 0}; {-2, -5, 5, -1, 6, -3, 5, 6, 6, -3, 0, 0}; {6, 1, -3, 1, 6, -5, 2, 1, -2, 0, 0, 0}; {5, 0, -4, 0, 5, 6, 2, -1, -1, -1, 0, 0}; {5, 0, -4, 0, 5, -5, 2, 1, -2, -1, 0, 0}; {6, 2, -1, 4, -2, 1, -3, -3, -4, -3, 0, 0}; {5, -1, 6, -3, 4, -5, -5, 4, 6, -5, 0, 0}; {1, -5, 2, 6, 1, -2, -2, 0, -4, -4, 0, 0}; {5, -1, 6, -2, 5, -5, 6, 4,

-5, -5, 0, 0}; {3, -3, 4, -4, 3, 6, 6, 3, 6, -5, 0, 0}; {-2, 4, -1, 3, -1, -3, 4, 4, -2, -1, 0, 0}; {-1, 6, 2, -5, 4, 3, -1, 0, -5, -2, 0, 0}; {-2, 5, 1, 6, 3, 3, -1, 0, -5, -3, 0, 0}; {-1, 6, 2, -5, 5, 0, 1, -4, -2, 1, 0, 0}; {-5, 0, 6, -3, 5, 0, -4, 6, -5, -5, 0, 0}; {-2, 3, -3, 0, -4, -4, -5, 4, -3, -4, 0, 0}; {-4, 2, -3, 1, -1, 5, 3, 2, 4, 4, 0, 0}; {5, -2, 4, -5, 4, -1, 6, 5, 6, 6, 0, 0}; {-3, -2, 0, -1, 4, -1, 6, -2, 4, 4, 0, 0}; {-5, 1, -4, 0, -1, 5, 2, 2, 4, 4, 0, 0}; {5, -1, 6, -2, -3, 6, 0, 1, 4, 5, 0, 0}; {4, -2, 5, -3, -4, 6, 0, 0, 3, 5, 0, 0}; {6, 0, -5, -1, -1, 5, 1, 2, 4, 4, 0, 0}; {4, -1, -5, 0, 1, 0, 6, -3, 1, 3, 0, 0}; {-1, 6, 2, -5, -3, 2, 5, -1, -1, -1, 0, 0}; {5, 1, -2, 4, -4, 0, -5, -5, 6, -3, 0, 0}; {-3, 5, 2, -4, 0, 6, 4, 6, -2, 1, 0, 0}; {6, -1, 5, -4, -3, 1, -2, 4, 4, 2, 0, 0}; {-5, 3, 0, 6, -1, 1, -5, -3, -5, -1, 0, 0}; {-5, 3, 0, 6, -1, 1, -5, -3, -4, 0, 0, 0}; {5, -1, 6, -2, 1, 2, -4, 4, 2, 1, 0, 0}; {4, -1, -5, 0, 4, 6, 1, -1, -2, -2, 0, 0}; {5, 1, -2, 4, -3, 0, -4, -5, -5, -3, 0, 0}; {1, -4, 4, -3, 1, 4, -1, -2, -3, -3, 0, 0}; {-4, 3, -1, 4, -4, 6, 6, -1, 1, 3, 0, 0}; {6, 1, -3, 2, -5, 5, 5, -2, 0, 3, 0, 0}; {5, 0, -4, 1, 6, 4, 5, -2, 1, 3, 0, 0}; {4, -1, -5, 0, 5, 3, 5, -3, 1, 3, 0, 0}; {5, 1, -2, 4, -2, 0, -4, -4, -5, -2, 0, 0}; {3, -3, 4, -4, 0, 0, -5, 3, 1, 0, 0, 0}; {2, -4, 3, -5, -1, -1, 6, 3, 0, 0, 0, 0}; {1, -5, 2, 6, -2, -2, 5, 2, 0, 0, 0, 0}; {4, 0, -3, 3, -3, -1, -4, -3, 6, -3, 0, 0}; {2, -3, 5, -2, 3, 5, 0, -1, -3, -1, 0, 0}; {3, -2, 6, -1, 5, 4, 3, -3, -1, 2, 0, 0}; {4, 0, -3, 3, -2, 0, -4, -3, -5, -3, 0, 0}; {2, -3, 5, -2, 4, 5, 0, 0, -3, -1, 0, 0}; {0, -5, 3, -4, 2, 4, 0, 0, -3, -3, 0, 0}; {5, -1, 6, -2, 4, 5, -4, -4, 2, 1, 0, 0}; {0, 5, 0, 3, -3, -3, -3, 3, 1, -3, 0, 0}; {6, 1, -2, 3, -1, 1, -3, -2, -5, -4, 0, 0}; {2, -4, 4, -4, 4, 5, 1, 1, -4, -3, 0, 0}; {-5, -3, 1, 1, -4, 5, 0, 5, 0, 2, 0, 0}; {-4, -1, 4, 5, 1, 0, -5, 1, -3, 0, 0, 0}; {-5, 1, -3, 1, 1, 5, 0, 3, 5, 3, 0, 0}; {3, -3, 5, -3, -3, 3, -1, 1, 4, 3, 0, 0}; {5, 0, -3, 2, 5, -2, -5, -3, 1, 2, 0, 0}; {0, 3, -4, -3, -4, -1, -5, -1, -4, 4, 0, 0}; {4, 0, -2, 4, -3, -1, 5, -4, -5, -1, 0, 0}; {6, 3, 2, -3, 3, -4, 3, 2, 6, -2, 0, 0}; {1, -5, 3, -5, -2, 0, 6, 2, 1, 0, 0, 0}; {1, -4, 5, -2, 3, 4, -1, -1, -3, 0, 0, 0}; {2, -2, -4, 2, -4, -2, 6, 4, 6, -2, 0, 0}; {0, 6, 2, 6, -2, -2, 5, 2, 0, 0, 0, 0}; {2, -2, -4, 2, -4, -1, -5, 5, -4, -1, 0, 0}; {3, 0, -1, 6, 1, 5, 2, 2, 5, -3, 0, 0}; {-1, 6, 3, -4, 1, 3, -2, -2, -4, -1, 0, 0}; {-2, 3, -2, 1, 4, 4, -2, 5, 3, 1, 0, 0}; {-1, 5, 1, 5, -3, -2, 5, 1, 1, 1, 0, 0}; {0, -5, 4, -3, 2, 4, 0, -3, -2, 0, 0, 0}; {1, -3, -5, 1, -5, -2, -5, 5, -4, -1, 0, 0}; {-1, 5, 1, 5, -3, -2, 5, 2, 0, 0, 0, 0}; {-2, 4, 0, 4, -4, -3, 4, 1, 0, -1, 0, 0}; {-1, 6, 3, -4, 1, 3, -1, -2, -4, -2, 0, 0}; {-3, 4, 1, 6, -1, 2, -2, -2, -4, -3, 0, 0}; {-4, 2, -2, 2, 6, -4, 3, 1, -1, -1, 0, 0}; {-2, 4, 0, 4, -3, -3, 4, 2, -1, 0, 0, 0}; {-3, 4, 1, 6, 0, 2, -2, -2, -4, -3, 0, 0}; {6, -1, 6, -2, 2, 1, -4, 4, 2, 0, 0, 0}; {-5, 2, -1, 5, 0, 1, -3, -2, -5, -2, 0, 0}; {5, 0, -3, 3, -1, -1, -2, 5, -4, 0, 0, 0}; {0, 5, 0, 4, -2, -3, -2, -2, -5, -5, 0, 0}; {2, -4, 4, -3, 4, 5, 1, 1, -3, -3, 0, 0}; {0, 5, 0, 4, -1, -3, -2, -1, -5, -5, 0, 0}; {-1, 4, -1, 3, -2, -4, -3, -2, -5, -5, 0, 0}; {0, 4, -2, 1, -4, -3, -5, 3, -2, -3, 0, 0}; {1, -5, 3, -4, 5, 4, 0, 1, -5, -2, 0, 0}; {-1, 3, -3, 0, -4, -3, -5, 3, -3, -4, 0, 0}; {5, 6, -3, -3, 3, -2, 4, -3, 3, 0, 0}; {3, 4, -5, -5, 1, -4, 3, -4, 3, 3, 0, 0}; {4, 5, -4, -4, 2, -2, 4, -3, 3, 3, 0, 0}; {-1, 3, -3, 0, -3, 2, -2, -4, -5, -5, 0, 0}; {-3, 2, -3, 1, -1, -5, 1, 2, 5, 4, 0, 0}; {-3, 2, -3, 1, 0, 6, 2, 3, 5, 4, 0, 0}; {-3, 2, -3, 1, 0, -5, 2, 3, 5, 5, 0, 0}; {2, -4, 4, -3, -2, 2, -2, 0, 4, 3, 0, 0}; {5, 0, -3, 3, 5, -1, 2, -3, -2, -2, 0, 0}; {2, -5, 2, 6, 6, -2, 0, 5, 3, 1, 0, 0}; {1, -5, 3, -4, -3, 2, -2, 0, 3, 3, 0, 0}; {-2, 5, 2, -4, -2, 6, -1, 2, 3, 0, 0, 0}; {4, 0, -2, 5, -3, -1, 5, -4, -5, -1, 0, 0}; {2, -3, 6, 0, 3, -4, 6,

-4, 0, 2, 0, 0}; {3, -3, 5, -2, 0, 5, -5, 1, 0, -1, 0, 0}; {-1, 3, -3, 0, 0, 4, 0, -5, 6, 1, 0, 0}; {-1, 3, -3, 0, 0, 4, 1, 6, 5, 3, 0, 0}; {-2, 2, -4, -1, -1, 3, 0, 6, 5, 3, 0, 0}; {0, -4, 6, 1, 6, -3, 4, 6, 6, -2, 0, 0}; {-5, 2, -1, 5, -3, 4, 5, 0, -1, -1, 0, 0}; {-2, 4, 0, 5, -3, -3, 5, 1, 0, -1, 0, 0}; {-5, 1, -3, 2, 6, -5, 2, 0, -2, 0, 0, 0}; {6, 1, -2, 4, -3, 0, -4, -4, -5, -4, 0, 0}; {4, -1, -4, 2, -5, -1, 2, -3, -3, -3, 0, 0}; {3, -3, 5, -2, 2, 6, -5, 2, 0, -1, 0, 0}; {6, -2, 4, -4, -2, 6, 4, -4, 6, 0, 0, 0}; {5, -3, 3, -5, -3, 5, 3, -4, 6, 0, 0, 0}; {-5, 0, -5, 0, 3, 0, 0, 1, -4, -5, 0, 0}; {-4, 2, -2, 4, -4, -5, -5, -3, 6, 6, 0, 0}; {1, -5, 3, -3, 1, 5, 6, 1, -1, -1, 0, 0}; {4, -3, 4, -3, 1, -1, -2, 0, -4, -5, 0, 0}; {1, -5, 3, -3, 2, 3, 5, 6, 4, 4, 0, 0}; {-5, 0, -5, 0, 4, 4, -2, -2, 2, 1, 0, 0}; {-1, 5, 1, -5, 0, 3, 5, -5, 6, 4, 0, 0}; {-3, 2, -3, 2, 6, -3, -3, 4, 1, -1, 0, 0}; {-4, 3, 0, -5, 1, 6, -2, 2, 2, 2, 0, 0}; {3, -4, 3, -4, 1, -1, -2, 0, -4, -4, 0, 0}; {2, -5, 2, -5, 0, -1, -2, -1, -4, -5, 0, 0}; f-1, 6, 3, -2, 5, -4, -1, 1, 2, 2, 0, 0}; {5, -2, 5, -2, 3, 4, -3, -3, 2, 1, 0, 0}; {-2, 3, -2, 3, -3, -3, 5, 4, -1, -2, 0, 0}; {-5, 0, -5, 0, 6, 6, -3, -3, 3, 2, 0, 0}; {5, -2, 5, -2, 4, 4, -3, -3, 2, 1, 0, 0}; {4, -3, 4, -3, 3, 4, -4, -4, 2, 1, 0, 0}; {4, -3, 4, -3, 3, 4, -3, -3, 2, 1, 0, 0}; {-5, 0, -5, 0, -5, 6, -4, -3, 6, 6, 0, 0}; {-2, 3, -2, 3, -1, -4, -4, -2, -5, -5, 0, 0}; {-5, -1, 5, -3, 4, 1, -4, -5, 1, 0, 0, 0}; {-3, 3, -1, 5, 2, 2, -1, 0, -5, -3, 0, 0}; {1, 6, 1, 6, 3, 4, 3, 1, -5, -5, 0, 0}; {-2, 2, -4, 0, -4, -4, -5, 4, -3, -4, 0, 0}; {-1, 4, -1, 4, 1, 3, 3, 0, 6, 6, 0, 0}; {-2, 3, -2, 3, 0, 2, 2, -1, 6, 6, 0, 0}; {1, -4, 5, 0, -1, 3, 6, 2, 4, 0, 0, 0}; {2, -5, 2, -5, 5, -2, -1, 4, 3, 1, 0, 0}; {5, -3, 3, -5, 4, -1, 6, 6, -5, 6, 0, 0}; {-2, -2, 0, 0, 6, 1, -5, -1, 5, 4, 0, 0}; {3, -4, 3, -4, -5, -1, 0, 6, 3, 2, 0, 0}; {1, 5, -1, 3, 1, 4, 4, -3, 6, 3, 0, 0}; {0, 4, -2, 2, 0, 4, 3, -5, 5, 3, 0, 0}; {1, 6, 1, 6, 5, -2, -2, 3, 3, 1, 0, 0}; {1, 6, 1, 6, 5, -2, -1, 4, 3, 1, 0, 0}; {-1, 3, -3, 1, -1, 3, 3, -4, 5, 2, 0, 0}; {-1, 5, 1, -5, -4, 0, -3, -1, 3, 3, 0, 0}; {1, 6, 1, 6, 6, -2, -1, 5, 3, 1, 0, 0}; {1, -4, 5, 0, 2, -4, 0, -5, -3, -2, 0, 0}; {0, 5, 0, 5, 5, -3, -1, 4, 2, 1, 0, 0}; {-1, 4, -1, 4, 4, -3, -4, 2, 3, 1, 0, 0}; {-2, 2, -4, 0, -1, 3, 2, -5, 5, 2, 0, 0}; {0, -5, 4, -1, 1, -4, -1, 6, -3, -2, 0, 0}; {-1, 4, -1, 4, 4, -3, -2, 4, 2, 0, 0, 0}; {0, 6, 2, -4, -2, 3, 5, -1, 0, -1, 0, 0}; {-2, 3, -2, 3, 4, -3, -4, 2, 2, 1, 0, 0}; {0, 6, 2, -4, -2, 4, 5, -1, 0, -1, 0, 0}; {-4, 0, 6, -2, -2, 2, 1, 6, 4, 2, 0, 0}; {-2, 4, 0, 6, -4, 2, 3, -2, -1, -1, 0, 0}; {6, -3, 2, 5, 4, -4, 3, -2, -4, 2, 0, 0}; {6, -2, 4, -4, -4, 1, -2, 5, 4, 1, 0, 0}; {-3, 2, -3, 2, 4, 1, 0, 5, 4, -1, 0, 0}; {-2, 3, -2, 3, 5, -3, -3, 3, 2, 0, 0, 0}; {1, -5, 3, -3, 0, 5, 6, 1, 0, -1, 0, 0}; {-3, 2, -3, 2, 4, -3, -3, 3, 2, 0, 0, 0}; {-5, 0, -5, 0, 2, -5, -5, 1, 1, 1, 0, 0}; {5, -3, 3, -4, -3, 1, 0, 5, 3, 1, 0, 0}; {3, -4, 3, -3, -1, 1, 0, -4, 3, 2, 0, 0}; {-5, 2, -1, -5, -1, 5, 2, 3, -2, 0, 0, 0}; {6, 1, -2, 6, -2, 4, 2, 3, -3, 0, 0, 0}; {-5, 0, -5, 1, 4, -4, -4, 3, 1, -1, 0, 0}; {3, -5, 1, 6, -4, 0, -1, 5, 3, 0, 0, 0}; {5, -2, 5, -1, 2, -1, -1, 0, -4, -5, 0, 0}; {1, 6, 1, -5, -2, -4, -3, -1, 6, 6, 0, 0}; {3, -3, 5, 0, 4, 5, 6, -5, 5, 4, 0, 0}; {0, 3, -4, 0, 2, -2, 6, -2, -5, 1, 0, 0}; {1, 6, 1, -5, -1, -2, -3, -2, -5, -5, 0, 0}; {0, 5, 0, 6, -2, -3, -3, -2, -5, 6, 0, 0}; {0, 5, 0, 6, -2, -2, -3, -2, -5, 6, 0, 0}; {-5, 0, -5, 1, 5, 5, -4, -4, 4, 4, 0, 0}; {3, -3, 5, 0, 5, -5, 3, 4, -2, -1, 0, 0}; {4, -3, 4, -2, 2, 3, -3, -3, 2, 1, 0, 0}; {3, -4, 3, -3, 1, 3, -3, -3, 2, 1, 0, 0}; {-3, 3, -1, 6, -1, 2, 4, 6, 5, 4, 0, 0}; {6, 0, -4, 3, -3, 0, 3, 6, 5, 4, 0, 0}; {4, -2, 6, 1, -5, -1, 2, 5, 4, 3, 0, 0}; {3, -3, 5, 0, 6, -2, 1, 5, 4, 3, 0, 0}; {0, 5, 0, 6, -1, -3, -3, -1, 6, 6, 0, 0}; {0, 5, 0, 6, -1, -3, -3, -1, -5, -5, 0, 0}; {0, 5, 0, 6, -1, -2, -3, 0,

3, 4, 0, 0}; {-3, 1, -5, 0, 4, 2, 1, 1, -3, -4, 0, 0}; {5, -2, 5, -1, 4, 5, -4, -4, 3, 2, 0, 0}; {3, -4, 3, -3, 2, 3, -4, -4, 2, 1, 0, 0}; {1, 6, 1, -5, 1, 2, -5, -4, 1, 1, 0, 0}; {4, -3, 4, -2, 4, 5, -5, -4, 6, 5, 0, 0}; {3, -4, 3, -3, 3, 4, 6, -5, 5, 4, 0, 0}; {-2, 3, -2, 4, -2, -4, -4, -2, 6, 6, 0, 0}; {0, 4, -2, 3, -4, 6, 0, -1, 3, 2, 0, 0}; {-4, 1, -4, 2, -4, -5, -4, -2, 2, 3, 0, 0}; {0, 4, -2, 3, -4, -5, 0, -1, 4, 2, 0, 0}; {3, -4, 3, -3, 3, 3, -4, -3, 1, 1, 0, 0}; {-1, 3, -3, 2, -4, -5, -1, -2, 4, 2, 0, 0}; {0, 5, 0, 6, 1, 1, 6, -5, 0, 1, 0, 0}; {6, -1, 6, 0, -5, -5, 4, 3, -2, -2, 0, 0}; {4, -3, 4, -2, 5, 5, -5, -4, 5, 5, 0, 0}; {3, -4, 3, -3, 4, 4, 6, -5, 5, 5, 0, 0}; {1, 5, -1, 4, -2, -3, 0, -1, 5, 3, 0, 0}; {-5, -1, 5, -2, 4, 1, 0, 1, -3, -4, 0, 0}; {6, -1, 6, 0, -4, -5, 3, 3, -2, -1, 0, 0}; {2, -5, 2, -4, 4, 3, -5, -4, 2, 2, 0, 0}; {5, -2, 5, -1, -5, -5, 3, 3, -2, -2, 0, 0}; {-2, 3, -2, 4, 0, 2, 2, 0, 6, 6, 0, 0}; {-5, -1, 5, -2, 5, -5, 6, 2, -3, -4, 0, 0}; {6, -1, 6, 0, -4, 6, -5, -3, 6, 6, 0, 0}; {4, 1, -4, -2, -1, 1, 1, -1, -5, -5, 0, 0}; {2, -5, 2, -4, 6, 3, -3, 0, 3, 2, 0, 0}; {3, -5, 1, 6, 3, 5, 4, 1, -4, -5, 0, 0}; {0, 4, -2, 3, 0, 4, 4, -5, 5, 3, 0, 0}; {-2, 2, -4, 1, -2, 2, 2, -5, 5, 2, 0, 0}; {0, 4, -2, 3, 0, 4, 5, -4, 5, 3, 0, 0}; {0, 5, 0, 6, 4, -3, -1, 3, 3, 2, 0, 0}; {-1, 5, 1, -4, -5, 1, 4, -2, -1, 0, 0}; {-1, 3, -3, 2, -1, 4, 4, -4, 5, 3, 0, 0}; {-1, 4, -1, 5, 4, -3, -3, 2, 3, 1, 0, 0}; {-2, 2, -4, 1, -1, 3, 2, 6, 5, 3, 0, 0}; {0, 6, 2, -3, -3, 3, 5, -2, 0, -1, 0, 0}; {-1, 4, -1, 5, 4, -3, -2, 3, 3, 1, 0, 0}; {-3, 1, -5, 0, -2, 2, 2, -5, 5, 2, 0, 0}; {-1, 5, 1, -4, -4, 2, 5, -2, 0, 0, 0, 0}; {-3, 1, -5, 0, -2, 2, 3, -5, 5, 2, 0, 0}; {-3, 1, -5, 0, -2, 2, 3, -5, 5, 3, 0, 0}; {-2, 3, -2, 4, 3, -4, -2, 3, 2, 2, 0, 0}; {-2, 4, 0, -5, -5, 1, 4, -2, -1, 0, 0, 0}; {-3, 1, -5, 0, -2, 2, 3, -5, 4, 2, 0, 0}; {-3, 1, -5, 0, -2, 3, 2, 6, 5, 2, 0, 0}; {-4, 0, 6, -1, -2, 2, 1, 6, 5, 2, 0, 0}; {-4, 0, 6, -1, -2, 2, 2, 6, 4, 2, 0, 0}; {-3, 2, -3, 3, 3, -4, -3, 2, 2, 1, 0, 0}; {-2, 4, 0, -5, -4, 2, 4, -2, -1, -1, 0, 0}; {-5, -1, 5, -2, -3, 1, 1, 6, 4, 2, 0, 0}; {-3, 2, -3, 3, 3, -4, -2, 3, 2, 0, 0, 0}; {-5, -1, 5, -2, -3, 1, 2, 6, 4, 2, 0, 0}; {-3, 3, -1, 6, -5, 1, 4, -2, -1, 0, 0, 0}; {-4, 2, -2, 5, 6, 0, 3, -3, -2, 0, 0, 0}; {-5, -1, 5, -2, -3, 1, 2, -5, 4, 1, 0, 0}; {-4, 2, -2, 5, 6, 0, 3, -2, -2, 0, 0, 0}; {6, -2, 4, -3, -4, 1, -1, 4, 4, 2, 0, 0}; {3, 6, -1, 3, 2, 6, 2, -4, 6, 2, 0, 0}; {4, -4, 2, -5, -5, 0, -2, 4, 3, 2, 0, 0}; {-3, 3, -1, 6, -4, -1, -4, -2, 3, 3, 0, 0}; {-5, -1, 5, -2, -2, 2, 1, 6, 4, 2, 0, 0}; {6, -2, 4, -3, -3, 1, 0, 6, 4, 1, 0, 0}; {-3, 3, -1, 6, -4, 2, 4, -2, -1, -1, 0, 0}; {-5, 0, -5, 1, 2, -5, -4, 1, 1, 1, 0, 0}; {-4,2,-2,5,-5, 1, 3, -3, -1, -1, 0, 0}; {-5, 0, -5, 1, 2, -5, -4, 2, 1, 0, 0, 0}; {3, -5, 1, -5, -5, 0, -1, 3, 3, 3, 0, 0}; {3, -5, 1, -5, -5, 0, -1, 4, 3, 1, 0, 0}; {-1, 2, -5, 0, -1, 4, 0, 6, 5, 2, 0, 0}; {2, 6, 0, 6, -5, -1, -1, 5, 3, 0, 0, 0}; {4, -1, -4, 5, -3, 2, 1, 2, -3, 0, 0, 0}; {4, -3, 4, -1, 2, 6, -5, 2, 0, -2, 0, 0}; {-2, 1, 6, -1, 0, -4, 4, -3, 6, 0, 0, 0}; {3, -4, 3, -2, 1, 3, -3, -3, 3, 1, 0, 0}; {1, 6, 1, -4, 0, 2, -4, -4, 2, 1, 0, 0}; {-2, 3, -2, 5, -3, -5, -5, -2, 6, 6, 0, 0}; {-2, 3, -2, 5, -3, -5, -4, -2, 6, 6, 0, 0}; {-4, -1, 4, -3, -1, -4, 4, -3, 6, 1, 0, 0}; {-5, -2, 3, -4, -2, -5, 3, -4, 5, 0, 0, 0}; {-2, 3, -2, 5, -3, -4, -4, -2, 6, 6, 0, 0}; {-1, 5, 1, -3, 2, 3, 4, 6, 4, 4, 0, 0}; {-2, 4, 0, -4, 1, 2, 3, 5, 4, 4, 0, 0}; {-4, 1, -4, 3, -5, -5, -5, -3, 6, 5, 0, 0}; {2, -5, 2, -3, 1, 2, -4, -4, 2, 1, 0, 0}; {1, 6, 1, -4, 1, 2, -5, -5, 2, 1, 0, 0}; {0, 5, 0, -5, 0, 1, -5, -5, 1, 1, 0, 0}; {-2, 2, -4, 2, 6, 6, -1, -2, 4, 2, 0, 0}; {5, -2, 5, 0, 5, 6, -5, -4, 6, 5, 0, 0}; {0, 5, 0, -5, 0, 2, -5, -5, 2, 1, 0, 0}; {-2, 3, -2, 5, -2, 0, 6, 6, 1, 0, 0, 0}; {3, -5, 1, -5, -1, 0, -2, 6, 2, -1, 0, 0}; {4, -2, 6, 2, -4, -1, 2, 4, 4, 3, 0, 0}; {0, 4, -2, 4, -4, -2, -2, 5, 2, -1, 0, 0};

{5, -4, 1, 6, -3, 5, 2, -5, 5, 0, 0, 0}; {-4, 0, 6, 0, 4, 1, 0, 1, -3, -4, 0, 0}; {-1, 4, -1, 6, -1, -2, 6, -5, -1, 1, 0, 0}; {-5, -1, 5, -1, 3, 1, 0, 1, -4, -5, 0, 0}; {-4, 1, -4, 3, -4, -5, -5, -3, 6, 6, 0, 0}; {0, 4, -2, 4, -4, -5, 0, -1, 4, 3, 0, 0}; {-2, 2, -4, 2, 6, 5, -1, -2, 3, 2, 0, 0}; {6, -1, 6, 1, 6, 6, -5, -4, 5, 5, 0, 0}; {6, -1, 6, 1, 6, 6, -5, -4, 6, 5, 0, 0}; {-1, 3, -3, 3, -4, -5, -1, -2, 4, 3, 0, 0}; {-2, 2, -4, 2, -5, 6, -2, -3, 4, 3, 0, 0}; {-5, -1, 5, -1, 4, 3, -2, -3, 2, 1, 0, 0}; {2, -5, 2, -3, 3, 3, 6, -5, 4, 4, 0, 0}; {1, 6, 1, -4, 2, 2, 5, 6, 4, 4, 0, 0}; {0, 4, -2, 4, -3, -4, -1, -2, 5, 4, 0, 0}; {-2, 2, -4, 2, -5, -5, -2, -2, 4, 3, 0, 0}; {-2, 2, -4, 2, -5, -5, -1, -2, 4, 2, 0, 0}; {-1, 4, -1, 6, 0, 1, 6, 6, 1, 1, 0, 0}; {-3, 1, -5, 1, 6, 6, -2, -3, 4, 2, 0, 0}; {-2, 2, -4, 2, -5, -5, 0, -1, 4, 2, 0, 0}; {1, 6, 1, -4, 2, 3, 6, -5, 5, 5, 0, 0}; {6, -2, 4, -2, 3, 0, -1, 0, -4, -5, 0, 0}; {5, -3, 3, -3, 2, -1, -2, 0, -4, -5, 0, 0}; {-5, 0, -5, 2, -4, -5, 6, -2, 1, 3, 0, 0}; {5, -3, 3, -3, 2, 0, -1, 0, -4, -5, 0, 0}; {-5, 0, -5, 2, -4, -5, -5, -2, 2, 3, 0, 0}; {6, -2, 4, -2, 4, 2, -4, -5, 2, 1, 0, 0}; {3, 6, -1, 4, -3, 6, 3, 3, -1, -3, 0, 0}; {3, -5, 1, -5, 1, -1, -2, -1, -4, -5, 0, 0}; {1, 4, -3, 2, -5, 4, 3, 2, -2, -3, 0, 0}; {3, -4, 3, -2, 5, 4, 5, -5, 5, 5, 0, 0}; {-2, 2, -4, 2, -4, -5, -2, -2, 4, 3, 0, 0}; {-3, 1, -5, 1, -5, 6, -2, -2, 3, 2, 0, 0}; {-3, 1, -5, 1, -5, 6, -1, -1, 3, 2, 0, 0}; {-4, 0, 6, 0, 6, 5, -2, -2, 2, 2, 0, 0}; {-1, 3, -3, 3, -3, -4, -2, -2, -5, 6, 0, 0}; {-1, 3, -3, 3, -3, -4, -2, -2, 6, 5, 0, 0}; {-1, 4, -1, 6, 1, 2, 6, 6, 1, 1, 0, 0}; {-3, 1, -5, 1, -5, -5, -2, -3, 4, 2, 0, 0}; {-3, 1, -5, 1, -5, -5, -2, -2, 3, 2, 0, 0}; {-4, 0, 6, 0, 6, 6, -2, -2, 3, 2, 0, 0}; {-5, -2, 3, -4, 1, 1, 0, 6, 3, -1, 0, 0}; {4, -4, 2, -4, 2, -1, -2, -1, -4, -5, 0, 0}; {-3, 1, -5, 1, -4, -5, -2, -2, 3, 3, 0, 0}; {-2, 3, -2, 5, 1, 1, 5, 6, 1, 1, 0, 0}; {-3, 1, -5, 1, -4, -5, -2, -2, 4, 3, 0, 0}; {6, -2, 4, -2, 5, 4, -3, -3, 2, 1, 0, 0}; {-5, -1, 5, -1, 6, 6, -3, -3, 3, 2, 0, 0}; {5, -3, 3, -3, 4, 6, 6, 2, -1, -3, 0, 0}; f 4, -4, 2, -4, 3, 6, 5, 1, -4, -5, 0, 0}; {-5, -1, 5, -1, -4, 1, 1, 5, 4, 2, 0, 0}; {-5, -1, 5, -1, -4, 1, 2, 6, 4, 2, 0, 0}; {5, -4, 1, 6, 3, 6, -5, -3, 5, 2, 0, 0}; {-3, 2, -3, 4, 3, -3, -3, 1, 3, 0, 0, 0}; {-4, 1, -4, 3, 2, -4, -4, 0, 2, 0, 0, 0}; {-5, -1, 5, -1, -3, 2, 2, 6, 4, 3, 0, 0}; {5,-4, 1, 6, 3, -5, 6, -3, -5, 4, 0, 0}; {6, -2, 4, -2, -4, 1, 1, 5, 4, 2, 0, 0}; {5, -3, 3, -3, -5, 0, 0, 5, 3, 2, 0, 0}; {4, -5, 0, 5, 2, 6, 6, -3, 6, 3, 0, 0}; {5, -3, 3, -3, -5, 0, 1, 6, 3, 1, 0, 0}; {5, -2, 5, 0, -1, 5, -5, 1, 0, 0, 0, 0}; {5, -3, 3, -3, -4, 1, 0, 4, 4, 2, 0, 0}; {3, 6, -1, 4, 2, 6, 4, -4, 6, 3, 0, 0}; {4, -4, 2, -4, -5, 0, -1, 4, 3, 2, 0, 0}; {3, 6, -1, 4, 2, 6, 5, -4, 6, 3, 0, 0}; {4, -4, 2, -4, -5, 0, 0, 4, 3, 3, 0, 0}; {-5, 3, 1, -1, 2, -5, -2, -3, 0, -4, 0, 0}; {4, -4, 2, -3, -4, 1, 0, 3, 4, 1, 0, 0}; {2, 5, -2, 4, 2, 6, 4, -5, 6, 3, 0, 0}; {0, 2, 6, -1, -4, -1, -3, -2, -4, 4, 0, 0}; {1, 4, -3, 3, 1, 5, 4, -5, 5, 3, 0, 0}; {0, 5, 0, -4, -2, 4, 5, -1, -1, -2, 0, 0}; {4, 5, -4, 0, -2, 6, 1, 3, -1, 3, 0, 0}; {1, 0, 1, 3, -1, 5, -1, -3, 4, 6, 0, 0}; {-1, 4, -1, -5, -2, 4, 5, 0, -1, -3, 0, 0}; {5, -5, -1, 4, 4, 0, -5, -1, -5, 1, 0, 0}; {-3, 1, -5, 2, 5, 6, 0, -1, 5, 2, 0, 0}; {-3, 1, -5, 2, 5, -3, 3, 1, -1, 0, 0}; {5, -4, 1, -5, -3, 5, 1, -5, 4, -1, 0, 0}; {-4, 1, -4, 4, -4, -5, -4, -3, 6, 5, 0, 0}; {-5, 0, -5, 3, -5, 6, -5, -3, 6, 5, 0, 0}; {-3, 1, -5, 2, 6, 5, -1, -2, 3, 3, 0, 0}; {5, -2, 5, 1, 6, 6, -4, 5, 5, 0, 0}; {2, 6, 0, -5, -1, -2, -2, -1, -5, 6, 0, 0}; {-5, 0, -5, 3, -4, -2, 5, 6, 0, 0, 0, 0}; {6, -2, 4, -1, 3, 4, -2, -3, 3, 1, 0, 0}; {3, 6, -1, 5, -4, 5, 2, -5, 5, 0, 0, 0}; {5, -3, 3, -2, 2, 0, -1, 0, -4, -5, 0, 0}; {5, -2, 5, 1, 6, 5, 6, -4, 5, 5, 0, 0}; {4, -5, 0, 6, -2, -5, 2, 0, 4, 2, 0, 0}; {5, -3, 3, -2, 3, 1, -3, -4, 1, 1, 0, 0}; {1, 4, -3, 3, -5, 4, 1, 6, 5, 0, 0, 0}; {2, 6, 0, -5, 0, -2, -2, -1, -5, 6, 0, 0}; {6, -3, 2, -4, 0, -2, 2, 0, 6, 4, 0, 0}; {-4, 0, 6, 1, 6, 5, -2, -2, 3, 2, 0, 0}; {2, -5, 2, -2, 4, 4, 5, -5, 5, 5, 0, 0}; {0, 4, -2, 5, -2, -3, -3, -2, -5, 6, 0, 0}; {-5, -1, 5, 0, 5, 5, -2, -3, 3, 2, 0, 0}; {2, 6, 0, -5, 0, 0, -4, -5, 1, 0, 0, 0}; {6, -2, 4, -1, 4, 5, -2, -3, 3, 1, 0, 0}; {-5, 0, -5, 3, -3, -1, 5, 5, 0, 0, 0, 0}; {4, -4, 2, -3, 3, 1, -4, -4, 1, 1, 0, 0}; {0, 4, -2, 5, -1, -3, -3, -2, -5, -5, 0, 0}; {-5, -1, 5, 0, 6, 5, -3, -3, 3, 2, 0, 0}; {6, -2, 4, -1, 5, 4, -4, -4, 3, 2, 0, 0}; {6, -2, 4, -1, 5, 4, -3, -3, 2, 2, 0, 0}; {4, -5, 0, 6, -1, -3, 2, 1, 4, 3, 0, 0}; {-5, -1, 5, 0, 6, 6, -3, -3, 3, 2, 0, 0}; {3,-5, 1, -4, 2, 5, 6, 1, -1, -3, 0, 0}; {5, -3, 3, -2, 5, 4, -4, -4, 2, 2, 0, 0}; {4, -5, 0, 6, 0, -1, 1, 0, 5, 3, 0, 0}; {4, -4, 2, -3, 4, 4, -4, -4, 2, 1, 0, 0}; {5, -4, 1, -5, 3, 6, -4, -4, 3, 1, 0, 0}; {-5, -1, 5, 0, -2, 3, 1, 4, 5, 2, 0, 0}; {-5, 0, -5, 3, 2, -4, -4, 0, 2, 0, 0, 0}; {3, 6, -1, 5, 2, 6, 4, -5, 6, 3, 0, 0}; {3, 6, -1, 5, 2, 6, 5, -5, 6, 4, 0, 0}; {-5, 1, -3, 6, 6, 1, 3, -4, -1, -2, 0, 0}; {-4, 0, 6, 2, 4, -2, -3, 3, 0, -1, 0, 0}; {6, -2, 4, 0, 2, -4, -4, 2, 0, -2, 0, 0}; {2, 4, -4, 2, 3, -2, 4, -2, 6, 0, 0, 0}; {2, -5, 2, -1, 4, 3, 5, -5, 5, 4, 0, 0}; {4, -4, 2, -2, 2, 3, -3, -3, 3, 1, 0, 0}; {4, -4, 2, -2, 2, -4, -5, 2, -1, -2, 0, 0}; {2, 6, 0, -4, 0, 6, 6, 1, -1, -3, 0, 0}; {1, 5, -1, -5, -1, 5, 5, 0, -2, -4, 0, 0}; {5, -3, 3, -1, 4, 2, -3, -3, 2, 2, 0, 0}; {-1, 3, -3, 5, -2, -4, -3, -2, -5, 6, 0, 0}; {-3, 0, 5, 0, 4, 2, 0, 1, -3, -5, 0, 0}; {1, 5, -1, -5, 1, -1, -5, -5, 0, 1, 0, 0}; {0, 3, -4, 3, -4, 5, 0, -1, 3, 2, 0, 0}; {2, 5, -2, 5, 0, 5, 5, -4, 6, 4, 0, 0}; {-3, -1, 3, -2, -3, 2, -3, 6, -4, 2, 0, 0}; {-5, -3, 1, -4, -4, 1, -4, 5, -5, 2, 0, 0}; {0, 3, -4, 4, 6, 2, -2, 4, 2, -2, 0, 0}; {0, -5, 4, 4, -1, 6, -1, 2, 3, -2, 0, 0}; {-2, 4, 0, -1, 5, 0, 3, 4, 5, 0, 0, 0}; {-2, 1, 6, 2, 5, 0, -3, 1, -1, -4, 0, 0}; {-1, -1, 1, -5, 0, -3, 3, -4, -4, 4, 0, 0}; {3, 1, 1, 5, 1, 5, -2, 4, 4, -5, 0, 0}; {2, 0, 0, 4, 0, 4, -2, 4, 4, -5, 0, 0}; {5, -5, -1, -5, -5, 0, -5, 4, -5, 2, 0, 0}; {3, 4, -5, 2, 1, 5, 0, -5, -3, 4, 0, 0}; {-4, 2, -2, -2, 3, -2, 2, 4, 4, -1, 0, 0}; {6, -1, 6, 5, -2, 4, -5, 6, -5, 1, 0, 0}; {-5, 1, -3, -3, 3, -2, 2, 3, 4, -1, 0, 0}; {5, -1, -5, -5, 1, -3, 1, 2, 4, -1, 0, 0}; {-2, -1, 2, -3, 1, -2, 3, -3, -5, 5, 0, 0}; {1, 1, 3, -2, 2, -1, 4, -3, -4, 5, 0, 0}; {4, 1, 0, 4, 1, -1, 3, -4, 5, -4, 0, 0}; {5, -2, 5, 5, -1, -5, 5, 5, 5, -2, 0, 0}; {0, 3, -4, -5, 0, 6, 1, 0, -3, 1, 0, 0}; {-1, 4, -1, 0, -2, 2, -2, -5, 5, -4, 0, 0}; {2, 0, 0, 6, 1, 5, -2, 4, 4, -4, 0, 0}; {5, 3, 3, -3, 4, 6, 0, 5, 4, -3, 0, 0}; {-2, 4, 0, 2, 6, 6, -1, 4, 2, 0, 0, 0}; {-3, 6, 5, -2, 5, -4, 1, 6, 5, -2, 0, 0}; {-3, 2, -3, -2, 3, -2, -4, -5, 5, -1, 0, 0}; {-3, 0, 5, 5, -2, 4, -1, -1, -4, 1, 0, 0}; {-4, 2, -2, 1, 1, 6, 1, 3, 5, 4, 0, 0}; {3, -4, 3, 5, 4, -2, 4, 5, -5, 5, 0, 0}; {-4, 3, 0, 4, -5, -1, -1, -5, 0, 1, 0, 0}; {-4, 4, 2, -5, 0, 3, -2, -5, -3, -1, 0, 0}; {6, 2, 0, 5, -1, 1, -3, -5, -3, -1, 0, 0}; {4, -1, -4, 0, 5, 6, 2, -2, -1, 1, 0, 0}; {4, 0, -2, 3, -3, 0, -4, 6, -3, -1, 0, 0}; {4, 0, -2, 3, -3, 0, -4, -4, -5, -3, 0, 0}; {3, -1, -3, 2, -4, -1, -5, -4, -5, -3, 0, 0}; {1, -4, 5, -3, 2, 4, 0, -1, -3, -1, 0, 0}; {-1, 6, 3, -5, 0, 3, -1, -1, -3, -3, 0, 0}; {-4, 1, -3, -1, -5, 0, -3, 6, 6, -5, 0, 0}; {6, 2, 1, 6, -1, 2, -3, 6, -2, 0, 0, 0}; {4, -1, -3, 1, 5, -5, 2, -2, 0, 1, 0, 0}; {4, 0, -1, 4, -3, 1, -4, 5, -3, -1, 0, 0}; {1, -4, 6, -2, 3, 5, 0, -3, -1, 1, 0, 0}; {6, 1, -1, 4, -2, 0, -4, -3, -5, -2, 0, 0}; {-2, 2, -3, -1, -5, 1, -3, 6, 6, -5, 0, 0}; {2, 2, 5, 3, -4, 1, -4, -1, 4, 4, 0, 0}; {3, -2, -4, 1, 4, -5, 0, -3, -1, 1, 0, 0}; {4, -1, -3, 2, 5, -4, 3, -2, 0, 0, 0, 0}; {3, -2, -4, 1, 4, -4, -3, 5, -1, 1, 0, 0}; {2, 0, 1, -3, 3, 1, -4, 3, 5, -3, 0, 0}; {0, -3, -3, 4, -3, 6, 0, 6, -4, -2, 0, 0}; {2, -3, -5, 0, 4, 6, 0, -3, -1, 1, 0, 0}; {2, -2, -3, 3, -4, -1, -5, 6, -5, -3, 0, 0}; {1, -3,

-4, 2, -5, -1, -5, 5, -4, -2, 0, 0}; {-2, 3, -1, 2, 4, 5, -1, 5, 4, 2, 0, 0}; {-1, 6, 4, -3, 2, 3, -1, -3, -2, 0, 0, 0}; {-2, 6, 5, -1, 5, -4, 4, 6, 6, -2, 0, 0}; {-1, 6, 4, -3, 2, 4, -1, -4, -1, 1, 0, 0}; {-2, 5, 3, -4, 1, 3, -1, -4, -2, 0, 0, 0}; {-1, -5, 6, 0, 6, -3, 6, 5, -5, -2, 0, 0}; {-1, -4, -4, 3, -2, 3, 0, 2, 4, -4, 0, 0}; {-5, 1, -2, 2, 6, -4, 3, 1, -1, 0, 0, 0}; {-4, 4, 3, -2, 4, -5, 3, 5, 5, -3, 0, 0}; {-1, 4, 0, 4, -1, -4, -3, -1, -5, -5, 0, 0}; {-2, 3, -1, 3, -1, -4, -3, -1, -5, -5, 0, 0}; {-3, 3, 0, 5, 3, 6, -2, 4, 5, 1, 0, 0}; {2, 3, -5, -5, 1, -3, 3, -4, 2, 2, 0, 0}; {-3, 4, 2, -4, -4, 0, 5, 0, 3, 0, 0, 0}; {6, 1, -1, 5, 5, -2, 5, -3, 2, 0, 0, 0}; {2, 6, 1, 4, 2, -2, 3, 4, -5, 5, 0, 0}; {-3, -3, 0, -1, 5, 0, 5, -2, 4, 4, 0, 0}; {-3, -3, 0, -1, 5, 0, 6, -2, 4, 4, 0, 0}; {3, -5, 2, 5, 3, -2, 4, 5, -5, 6, 0, 0}; {-1, -4, -4, 4, -4, 5, 0, 6, -4, -3, 0, 0}; {2, -4, 5, -2, 0, -4, 0, 3, 3, 0, 0, 0}; {2, -2, -3, 4, -4, 1, -5, 5, -3, -1, 0, 0}; {-2, 3, -1, 3, 4, 6, -1, 5, 4, 2, 0, 0}; {-3, 2, -2, 2, 3, 6, -2, 4, 3, 1, 0, 0}; {-3, 2, -2, 2, 3, 6, -2, 4, 3, 2, 0, 0}; {-2, -5, -5, 3, -4, 4, 0, 6, -4, -2, 0, 0}; {5, -2, 6, -1, 1, 6, -5, 2, 1, -1, 0, 0}; {5, -1, -4, 2, 5, -3, -5, -4, 1, 2, 0, 0}; {3, -3, 6, 0, 4, -3, 6, 6, 0, 1, 0, 0}; {-2, 4, 1, -5, -1, 4, 5, 1, -1, -1, 0, 0}; {3, -5, 2, 6, -4, 0, -1, 5, 3, 1, 0, 0}; {4, -3, 5, -2, 1, 6, -5, 3, 1, -2, 0, 0}; {6, -1, -5, 0, 4, -4, -4, 4, 1, -1, 0, 0}; {-4, 2, -1, 5, -1, 2, 3, 5, 5, 3, 0, 0}; {-5, 1, -2, 4, -2, 1, 3, 4, 4, 3, 0, 0}; {-4, 3, 1, -4, 3, -5, -2, 0, 2, 1, 0, 0}; {4, -3, 5, -2, 3, 5, -4, -5, 3, 1, 0, 0}; {-3, 2, -2, 3, -4, -4, 4, 1, -1, -2, 0, 0}; {-1, 5, 2, -4, 2, 3, 4, 6, 5, 4, 0, 0}; {1, 5, 0, 4, -4, -4, 1, 0, 4, 2, 0, 0}; {0, 4, -1, 3, -4, -4, 0, -1, 4, 2, 0, 0}; {5, -2, 6, -1, 5, 6, -5, -4, 6, 5, 0, 0}; {6, 0, -3, 3, -2, 0, 2, 4, 4, 3, 0, 0}; {-2, 2, -3, 1, 6, -5, -1, -2, 4, 1, 0, 0}; {6, 1, -1, 6, 2, 6, -3, 0, 2, 1, 0, 0}; {-4, 0, -5, -1, 4, 1, -1, 5, 3, -1, 0, 0}; {0, 4, -1, 3, -3, -3, -4, 3, 0, -3, 0, 0}; {-5, -1, 6, -2, 4, 1, 0, 1, -3, -4, 0, 0}; {-4, 0, -5, -1, 6, -5, 6, 2, -2, -4, 0, 0}; {-3, 2, -2, 3, -1, 1, 2, -1, 6, 6, 0, 0}; {6, 1, -1, 6, 5, -3, 2, -5, 0, 0, 0, 0}; {6, 0, -3, 3, 1, 5, -4, 2, 4, 1, 0, 0}; {-2, -1, 3, 4, -2, 6, 0, 6, 1, 2, 0, 0}; {1, -5, 4, -2, -3, 2, 5, -1, 1, 0, 0, 0}; {0, 4, -1, 3, 1, -4, 3, 4, 6, 5, 0, 0}; {-4, -4, -1, -1, 5, 0, 6, -2, 4, 3, 0, 0}; {-3, -2, 2, 3, -2, 6, 1, 6, 1, 2, 0, 0}; {-4, -3, 1, 2, -3, 5, 0, 6, 1, 2, 0, 0}; {6, 6, -3, -3, 3, -1, 4, -2, 3, 4, 0, 0}; {6, -3, 3, 6, 3, -5, 6, -2, -5, 3, 0, 0}; {-3, 3, 0, 6, -5, -1, -4, -1, 3, 2, 0, 0}; {-4, 1, -3, 2, 2, -5, -5, 1, 3, 1, 0, 0}; {-5, -1, 6, -2, -3, 1, 2, -5, 4, 2, 0, 0}; {-5, -1, 6, -2, -3, 2, 0, 5, 5, 2, 0, 0}; {5, -4, 2, 5, 3, -5, 4, -3, -5, 3, 0, 0}; {4, -5, 1, 4, 3, -5, 3, -3, -5, 3, 0, 0}; {-5, 1, -2, 4, 6, -2, -5, -3, 2, 2, 0, 0}; {5, -2, 6, -1, 0, 3, -1, 0, 5, 3, 0, 0}; {-4, 2, -1, 5, -5, 1, 3, -2, -1, -2, 0, 0}; {3, -5, 2, -5, -5, -1, 0, 5, 3, 1, 0, 0}; {-1, 2, -4, 0, -1, 4, 0, -5, 6, 1, 0, 0}; {5, -4, 2, 6, 5, 1, -5, 6, 6, 0, 0, 0}; {3, -4, 4, -2, -1, 2, -2, 0, 4, 3, 0, 0}; {4, -2, -5, 2, 4, -4, 6, -4, 1, 2, 0, 0}; {2, -5, 3, -3, -2, 1, -2, -1, 4, 3, 0, 0}; {2, -5, 3, -3, -2, 1, -2, 0, 4, 3, 0, 0}; {3, -3, 6, 1, 4, -4, 6, 6, 0, 2, 0, 0}; {2, -3, -5, 3, -4, 1, 0, 2, -4, 0, 0, 0}; {-2, 3, -1, 5, -4, -1, -2, 6, 2, 1, 0, 0}; {0, 6, 3, -2, 2, -5, 4, 4, -1, 0, 0, 0}; {2, -5, 3, -3, 0, 5, 6, 1, 0, -2, 0, 0}; {2, -5, 3, -3, 0, 5, 6, 2, 0, -2, 0, 0}; {1, -4, 6, 2, -4, 0, -1, 2, -4, 0, 0, 0}; {-1, 5, 2, -3, 2, 6, 3, 4, -2, 0, 0, 0}; {2, -4, 5, 0, 5, -2, 2, 4, 4, 4, 0, 0}; {4, -3, 5, -1, 3, -5, -5, 3, 0, -1, 0, 0}; {-2, 2, -3, 2, 5, -3, -3, 4, 2, -1, 0, 0}; {-4, -1, 5, -3, -1, -5, 4, -4, 6, 0, 0, 0}; {-2, 3, -1, 5, -3, -5, -4, -2, 6, 6, 0, 0}; {-3, 3, 0, -5, 0, 2, 3, 5, 4, 3, 0, 0}; {-5, 1, -2, 5, -1, 1, 3, 5, 4, 3, 0, 0}; {-3, 2, -2, 4, -3, -1, 6, 6, 0, 0, 0, 0}; {5, -1, -4, 3, -3, 0, 2, 4, 4, 3, 0, 0}; {4, -2, -5, 2, -4, -1, 2, 4, 4, 3, 0, 0}; {1, -5, 4, -1, 5, -3, 1, 4, 4, 3, 0, 0}; {0, 6, 3, -2, 4, -4, 0, 4, 3, 3, 0, 0}; {1, -4, 6, 2, -3, 2, -5, 0, 1, 1, 0, 0}; {1, -5, 4, -1, 5, -3, 2, 4, 4, 4, 0, 0}; {3, -3, 6, 1, -5, -1, 2, 4, 4, 3, 0, 0}; {2, -4, 5, 0, 6, -2, 1, 4, 4, 2, 0, 0}; {2, -4, 5, 0, 6, -2, 1, 4, 4, 3, 0, 0}; {-2, 3, -1, 5, -2, 2, 4, -5, 5, 4, 0, 0}; {-1, 5, 2, -3, 3, -4, 0, 3, 3, 3, 0, 0}; {-5, -2, 4, -4, -1, -5, 4, -4, 6, 0, 0, 0}; {5, -4, 2, 6, -3, 6, 2, -4, 5, 0, 0, 0}; {-4, 1, -3, 3, -4, -5, -5, -3, 6, 6, 0, 0}; {-4, 2, -1, 6, 0, 1, 3, 5, 4, 3, 0, 0}; {5, -2, 6, 0, 6, 6, 6, -4, 6, 5, 0, 0}; {5, -2, 6, 0, 6, 6, -5, -4, 6, 5, 0, 0}; {3, -3, 6, 1, -4, -2, 1, 3, 3, 2, 0, 0}; {2, -5, 3, -3, 3, 4, 6, -5, 5, 4, 0, 0}; {0, 5, 1, -5, 1, 2, 5, 6, 4, 4, 0, 0}; {-4, 1, -3, 3, -3, -1, 5, 6, 0, 0, 0, 0}; {2, -4, 5, 0, -5, -2, 1, 3, 3, 2, 0, 0}; {3, -2, -4, 4, 0, 4, -4, -1, 1, 0, 0, 0}; {0, 5, 1, -5, 1, 3, 5, -5, 6, 4, 0, 0}; {-3, 2, -2, 4, -2, 1, 4, -4, 6, 4, 0, 0}; {-1, 5, 2, -3, 4, -4, 0, 4, 4, 3, 0, 0}; {-3, 3, 0, -5, 2, 6, -1, 3, 4, 3, 0, 0}; {4, -5, 1, 5, -3, 5, 2, -5, 5, -1, 0, 0}; {3, 6, 0, 4, -4, 5, 2, -5, 5, 0, 0, 0}; {2, 5, -1, 3, -4, 5, 3, 3, -2, -3, 0, 0}; {1, 5, 0, 5, -1, -3, -2, -1, -5, -5, 0, 0}; {4, -4, 3, -4, 2, 1, -4, -5, 1, 0, 0, 0}; {-2, 3, -1, 5, 0, 1, 4, 5, 4, 4, 0, 0}; {-3, 1, -4, 1, -5, -5, -3, -2, -5, 6, 0, 0}; {-3, 1, -4, 1, -5, -5, -1, -2, 4, 2, 0, 0}; {3, 6, 0, 4, -3, 5, 2, -5, 5, 0, 0, 0}; {2, 6, 1, 6, 1, -2, -2, -1, -4, -5, 0, 0}; {4, -4, 3, -4, 3, 5, 5, 1, -4, -5, 0, 0}; {-4, -1, 5, -3, 4, 1, 3, 1, -4, 6, 0, 0}; {-5, -5, -2, -1, 4, -1, 4, -2, 4, 3, 0, 0}; {-4, 1, -3, 3, 1, 6, -4, 1, 2, 1, 0, 0}; {6, -2, 5, -2, -5, 0, 0, 5, 4, 2, 0, 0}; {5, 5, -4, -3, 3, -3, 4, -3, 4, 3, 0, 0}; {4, 4, -5, -4, 2, -2, 4, -3, 3, 3, 0, 0}; {6, -2, 5, -2, -4, 0, 1, 5, 4, 2, 0, 0}; {-5, 0, -4, 2, 1, 6, -4, 1, 2, 1, 0, 0}; {6, -2, 5, -2, -4, 0, 1, 6, 4, 2, 0, 0}; {5, -3, 4, -3, -5, 0, 0, 5, 4, 1, 0, 0}; {5, -3, 4, -3, -5, 0, 0, 5, 4, 2, 0, 0}; {5, 1, 0, -3, 0, 6, -3, -4, -1, -4, 0, 0}; {-5, 1, -2, 5, 6, -2, 6, -3, 2, 1, 0, 0}; {4, -3, 5, -1, -1, 3, -2, 1, 4, 3, 0, 0}; {3, -4, 4, -2, -2, 2, -2, 0, 4, 3, 0, 0}; {-4, 2, -1, 6, -5, 1, 3, -2, 0, -2, 0, 0}; {3, 6, 0, 4, 2, 5, 5, -3, 6, 3, 0, 0}; {4, -4, 3, -4, -5, -1, 1, 6, 4, 2, 0, 0}; {2, 6, 1, -5, 6, -1, -2, 3, 4, 1, 0, 0}; {3, -4, 4, -1, -1, 5, 6, -1, 1, 0, 0, 0}; {0, 3, -3, 2, 0, 4, 3, -5, 5, 3, 0, 0}; {3, -3, 6, 2, 3, -2, 1, -5, -2, -2, 0, 0}; {-1, 2, -4, 1, -1, 3, 3, -5, 5, 3, 0, 0}; {-1, 2, -4, 1, -1, 3, 4, -4, 5, 2, 0, 0}; {0, 5, 1, -4, -4, 0, -3, -1, 3, 3, 0, 0}; {2, -3, -5, 4, -4, 1, 0, 2, -3, 0, 0, 0}; {-2, 3, -1, 6, -4, 0, -4, -4, 2, 1, 0, 0}; {-1, 5, 2, -2, 2, 5, 4, 6, 0, 2, 0, 0}; {6, -3, 3, -4, -3, -3, 6, 3, -4, 5, 0, 0}; {-2, 5, 3, 0, 5, -1, -2, 0, -5, -1, 0, 0}; {-4, 0, -5, 1, 3, -4, -4, 2, 1, -1, 0, 0}; {-5, -2, 4, -3, -2, 2, 1, 6, 4, 1, 0, 0}; {5, -2, 6, 1, 5, -5, 6, -5, 6, 5, 0, 0}; {-4, 1, -3, 4, -4, -1, 6, 6, 0, 0, 0, 0}; {-4, 0, -5, 1, 4, -4, -4, 3, 1, -2, 0, 0}; {-5, -1, 6, 0, 3, -4, -4, 3, 1, -2, 0, 0}; {5, -4, 2, -5, -3, 6, 2, -5, 5, 0, 0, 0}; {4, -5, 1, 6, -4, 5, 2, -5, 5, -1, 0, 0}; {-5, 0, -4, 3, -5, 6, -5, -3, 6, 5, 0, 0}; {-5, -1, 6, 0, 4, 5, -2, -2, 3, 1, 0, 0}; {6, -2, 5, -1, 3, 4, -2, -3, 3, 1, 0, 0}; {-3, 1, -4, 2, 6, -3, -3, 4, 1, -1, 0, 0}; {3, 6, 0, 5, -4, 5, 2, -5, 5, 0, 0, 0}; {6, -2, 5, -1, 4, 2, -3, -3, 1, 2, 0, 0}; {3, -5, 2, -4, 1, -1, -2, -1, -4, -5, 0, 0}; {6, -2, 5, -1, 4, 3, -3, -3, 2, 2, 0, 0}; {5, -3, 4, -2, 3, 2, -3, -3, 1, 2, 0, 0}; {2, -5, 3, -2, 4, 4, 5, -5, 5, 5, 0, 0}; {5, -4, 2, -5, -1, -2, 2, 1, 5, 3, 0, 0}; {6, -2, 5, -1, 4, 4, -3, -3, 3, 2, 0, 0}; {-2, 3, -1, 6, 0, 2, 5, 6, 5, 4, 0, 0}; {4, -5, 1, 6, -2, -2, 2, 1, 5, 2, 0, 0}; {5, -3, 4, -2, 3, 4, -3, -3, 2, 1, 0, 0}; {-5, 0, -4, 3, -3, -1, 5, 5, 0, 0, 0, 0}; {5, -3, 4, -2, 3, 4, -3, -4, 3, 1, 0, 0}; {5, -3, 4, -2, 3, 4, -2, -3, 3, 1, 0, 0}; {-4, 1, -3, 4, -2, 1, 4, 6, 5, 4, 0, 0}; {6, -2, 5,

-1, 4, -5, -5, 2, -1, -3, 0, 0}; {6, -1, -5, 2, -4, 0, 3, 6, 5, 4, 0, 0}; {-1, 3, -2, 4, -2, -3, -3, -2, -5, 6, 0, 0}; {-5, -1, 6, 0, 6, 6, -3, -4, 6, 5, 0, 0}; {-5, -1, 6, 0, 6, 6, -3, -3, 3, 2, 0, 0}; {4, -5, 1, 6, -1, -2, 1, 0, 5, 3, 0, 0}; {4, -5, 1, 6, -1, -2, 1, 0, 6, 4, 0, 0}; {3, 6, 0, 5, -2, -3, 1, 0, 5, 3, 0, 0}; {4, -4, 3, -3, 3, 3, -4, -4, 2, 2, 0, 0}; {4, -4, 3, -3, 3, 4, -4, -4, 2, 1, 0, 0}; {4, -4, 3, -3, 3, 4, -4, -4, 3, 2, 0, 0}; {5, -3, 4, -2, 4, 5, -3, -4, 3, 1, 0, 0}; {2, 5, -1, 4, -3, -3, 1, 0, 5, 2, 0, 0}; {3, -5, 2, -4, 2, 3, -4, -4, 2, 1, 0, 0}; {-2, 1, -5, 0, 6, 3, 1, 1, -2, -4, 0, 0}; {-3, 0, 6, -1, 5, 2, 1, 1, -3, -4, 0, 0}; {-3, 0, 6, -1, 5, 2, 2, 1, -3, -4, 0, 0}; {4, -5, 1, 6, 0, -1, 1, 0, 6, 4, 0, 0}; {5, -3, 4, -2, 5, 5, -3, -4, 3, 2, 0, 0}; {4, -4, 3, -3, 4, 5, -4, -4, 3, 2, 0, 0}; {1, 5, 0, 6, 1, 4, 4, 0, -4, -5, 0, 0}; {-1, 3, -2, 4, 0, 3, 3, 0, 6, 6, 0, 0}; {3, -5, 2, -4, 6, -1, 0, 5, 3, 2, 0, 0}; {2, 6, 1, -5, 5, -2, -1, 4, 3, 1, 0, 0}; {-4, -2, 3, -4, 5, -4, -5, -2, -5, 4, 0, 0}; {-4, 0, -5, 2, 3, -4, -3, 3, 1, -1, 0, 0}; {4, -5, 1, -5, -4, 5, 1, 6, 4, -1, 0, 0}; {5, -3, 4, -1, 2, 4, -2, -2, 4, 1, 0, 0}; {1, 3, -4, 1, 2, -2, 6, -2, -5, 1, 0, 0}; {0, 2, -5, 0, 1, -3, 5, -3, 6, 0, 0, 0}; {4, -3, 5, 1, 5, 4, 6, -4, 5, 5, 0, 0}; {1, 5, 0, -5, -1, -3, -3, -1, -5, -5, 0, 0}; {-2, 0, 5, -2, 0, -3, 4, -3, 6, 1, 0, 0}; {1, 6, 2, -2, 3, 3, 5, -5, 5, 4, 0, 0}; {3, -5, 2, -3, 1, 3, -3, -3, 3, 1, 0, 0}; {1, 4, -2, 4, -5, -1, -2, 4, 2, -1, 0, 0}; {1, 5, 0, -5, 0, -1, -3, -2, -5, -5, 0, 0}; {2, 5, -1, 5, -3, -4, 1, 0, 5, 3, 0, 0}; {3, -5, 2, -3, 2, 2, -4, -4, 2, 1, 0, 0}; {1, 4, -2, 4, -4, -4, 1, 0, 5, 2, 0, 0}; {2, 6, 1, -4, 1, 2, -4, -4, 2, 1, 0, 0}; {0, 3, -3, 3, -5, -5, 0, -1, 5, 2, 0, 0}; {6, -3, 3, -3, 2, 0, 0, 0, -4, -5, 0, 0}; {6, -2, 5, 0, 6, 5, -5, -4, 5, 5, 0, 0}; {1, 4, -2, 4, -3, -5, 0, -1, 4, 3, 0, 0}; {-4, -1, 5, -1, 4, 2, 0, 1, -3, -4, 0, 0}; {-4, 0, -5, 2, -4, -5, -5, -3, 6, 6, 0, 0}; {3, 6, 0, 6, -1, -2, -1, -1, -5, 6, 0, 0}; {2, 5, -1, 5, -2, -3, 0, -1, 5, 3, 0, 0}; {2, 6, 1, -4, 2, 2, -5, -5, 2, 1, 0, 0}; {1, 5, 0, -5, 1, 1, -5, -5, 1, 1, 0, 0}; {0, 3, -3, 3, -4, -5, 0, -1, 4, 2, 0, 0}; {0, 3, -3, 3, -4, -4, 0, -1, 4, 2, 0, 0}; {-3, 1, -4, 3, -3, -2, 6, 5, 0, -1, 0, 0}; {2, 5, -1, 5, -1, -3, 0, -1, 5, 4, 0, 0}; {3, -5, 2, -3, 4, 3, -5, -4, 2, 2, 0, 0}; {2, 6, 1, -4, 3, 3, -5, -5, 2, 1, 0, 0}; {0, 3, -3, 3, -3, -4, -1, -1, 4, 3, 0, 0}; {-1, 3, -2, 5, 0, 1, 6, 6, 1, 0, 0, 0}; {-3, 0, 6, 0, 6, -5, -2, -2, 4, 2, 0, 0}; {-5, -1, 6, 1, -4, 2, 3, -5, 5, 4, 0, 0}; {-2, 1, -5, 2, -2, 3, 3, 6, 5, 4, 0, 0}; {6, -4, 1, -5, 3, -5, 6, -3, 6, 4, 0, 0}; {-4, -1, 5, 0, -2, 3, 1, 4, 5, 1, 0, 0}; {-2, 0, 5, -1, 0, -4, 3, -4, 5, 0, 0, 0}; {6, -5, -1, 4, 5, 0, -5, -1, -5, 1, 0, 0}; {-2, 1, -5, 2, 5, -5, 0, -1, 4, 1, 0, 0}; {0, 4, -1, -5, -1, 5, 5, 0, -2, -3, 0, 0}; {-1, 2, -4, 3, -4, 5, 0, -1, 3, 3, 0, 0}; {-2, 1, -5, 2, -5, 5, -1, -2, 3, 3, 0, 0}; {4, 6, -1, 5, -3, 6, 3, 3, -1, -3, 0, 0}; {-4, -1, 5, 0, 5, 6, -1, -2, 3, 1, 0, 0}; {-3, 0, 6, 1, -5, 6, -2, -3, 3, 3, 0, 0}; {6, -3, 3, -2, 4, -5, -5, 2, 0, -2, 0, 0}; {6, -5, -1, 5, 4, 0, -5, -1, 6, 0, 0, 0}; {-5, -3, 2, -3, -2, 5, 1, 5, 2, -2, 0, 0}; {-5, -3, 2, -3, -2, 5, 1, 6, 3, -1, 0, 0}; {-5, -2, 4, 0, 2, 6, -1, -2, 3, 0, 0, 0}; {-4, 0, -5, 4, -4, 3, 3, -1, -3, -4, 0, 0}; {-2, -2, 1, -5, 0, -3, 3, -4, -4, 4, 0, 0}; {-3, -3, 0, 6, 4, -4, 2, -2, -1, 4, 0, 0}; {5, 5, -4, 3, 2, 6, 0, -4, -2, 4, 0, 0}; {1, -1, 0, 5, 2, 4, -3, 3, 2, -5, 0, 0}; {-5, -4, 0, -4, -3, 1, -3, 3, 6, 4, 0, 0}; {-3, -2, 2, -1, 4, 3, -3, 2, 5, 2, 0, 0}; {6, -2, 5, 5, 2, 6, 1, -2, -5, -3, 0, 0}; {1, -1, 0, 6, 2, 4, -2, 3, 3, -4, 0, 0}; {-5, 2, 0, 3, -4, -3, 4, -1, 0, -2, 0, 0}; {-1, 3, -1, -1, 6, -3, 4, 1, -4, -2, 0, 0}; {-1, -2, 1, -4, 0, -2, 4, -4, -4, 5, 0, 0}; {-3, 1, -3, -2, 5, -4, 3, 1, -4, -3, 0, 0}; {1, -3, -3, 2, -4, -1, -5, 5, -4, -1, 0, 0}; {-3, 5, 5, -1, 5, -4, 4, 6, 6, -2, 0, 0}; {-3, 5, 5, -1, 5, -4, 5, 5, 6, -4, 0, 0}; {-5, 2, 1, 6, 2, -4, -1, -2, 1, 3, 0, 0}; {3, -1, -1, 5, -4, 1, -3, 5, -2, -1, 0, 0}; {-1, 6, 5, -2, 0, 6, 0, 4, 0, -1, 0, 0}; {4, 0, 0, 6, -2, 2, -3, 6, -3, -3, 0, 0}; {0, -5, 6, -1, 3, 5, 0, -3, -1, 0, 0, 0}; {-2, 5, 4, -3, 1, 4, -1, -4, -1, 0, 0, 0}; {-4, 2, 0, 4, -5, -2, 4, -1, 1, 1, 0, 0}; {-5, 4, 5, 0, 6, 3, -2, 4, -5, -3, 0, 0}; {1, -4, -5, 1, 5, 1, -5, -1, 0, 0, 0, 0}; {3, -1, -1, 6, -1, -4, 2, -5, -3, -1, 0, 0}; {-2, 4, 2, -5, -2, 6, -1, 1, 2, 1, 0, 0}; {6, 0, -2, 3, 6, -3, 3, -1, 1, 1, 0, 0}; {6, 1, 0, 6, -2, 2, -3, 6, -2, 0, 0, 0}; {5, -2, -5, -1, 1, 3, -3, 3, 3, 2, 0, 0}; {4, -2, -4, 1, 4, -3, -3, 5, -1, 1, 0, 0}; {4, 0, 0, -5, 1, 5, 1, 4, 4, -3, 0, 0}; {-4, 3, 2, -4, -5, -1, 4, -1, 2, 0, 0, 0}; {-5, -5, -1, -2, 3, -2, 4, -3, 3, 4, 0, 0}; {5, 0, -1, 5, 5, -3, 3, -2, 1, -1, 0, 0}; {6, 2, 2, -3, -2, 3, -2, 6, -2, -2, 0, 0}; {6, 6, -2, -3, 3, -2, 4, -3, 3, 4, 0, 0}; {5, 5, -3, -4, 2, -3, 3, -4, 3, 4, 0, 0}; {0, 6, 4, -3, -3, 1, -5, 1, 3, 1, 0, 0}; {6, 1, 0, 6, -5, 4, -2, 3, -1, 0, 0, 0}; {1, 5, 1, 4, 3, -3, 1, -1, -4, 6, 0, 0}; {3, -1, -1, 6, -3, 1, -4, 6, -3, -2, 0, 0}; {5, 1, 1, -4, 0, -3, 3, -4, -3, -1, 0, 0}; {5, 2, 3, -1, 4, 2, -3, 4, 6, -3, 0, 0}; {2, -4, 6, -1, 1, -4, 1, 4, 2, 0, 0, 0}; {4, 0, 0, -5, -1, -4, 3, -4, -4, -2, 0, 0}; {3, -1, -1, 6, -2, -5, 2, -5, -3, -3, 0, 0}; {3, -1, -1, 6, -2, -5, 2, -5, -3, -2, 0, 0}; {0, 6, 4, -3, -1, -5, 0, 2, 3, 1, 0, 0}; {-3, 3, 1, 6, -4, -1, 5, 0, 1, 0, 0, 0}; {-3, 4, 3, -3, 0, 4, -1, -5, -1, 0, 0, 0}; {6, 3, 4, 0, 5, 1, -2, 4, -5, -3, 0, 0}; {6, 0, -2, 3, 5, -1, 4, 6, 2, 0, 0, 0}; {6, 3, 4, 0, 5, 2, -2, 4, -5, -3, 0, 0}; {5, 1, 1, -4, 0, -4, 3, -3, -3, -2, 0, 0}; {3, 0, 1, -2, 3, 1, -4, 2, 6, -4, 0, 0}; {-2, 5, 4, -1, 2, -1, 5, -3, -1, -1, 0, 0}; {-2, 5, 4, -1, 2, -1, 5, -2, -2, -2, 0, 0}; {-5, 1, -1, 5, -5, 3, -3, 0, 1, -1, 0, 0}; {4, -2, -4, 2, 4, -4, -3, 5, -1, 1, 0, 0}; {-1, 5, 3, -3, 0, 5, 6, 3, -1, 0, 0, 0}; {2, -1, 0, -3, 3, 1, -5, 2, 5, -4, 0, 0}; {1, 5, 1, 5, 6, -5, 5, 1, 5, 5, 0, 0}; {0, 6, 4, -2, 2, -5, 5, 5, -1, 1, 0, 0}; {-1, 5, 3, -3, 1, -5, 4, 4, -1, 1, 0, 0}; {-2, 4, 2, -4, 0, -5, 3, 3, -1, 1, 0, 0}; {5, -1, -3, 3, -3, 1, 2, 4, 4, 3, 0, 0}; {4, -2, -4, 2, -4, 0, 2, 3, 4, 3, 0, 0}; {-4, 2, 0, 6, 1, 5, -2, 3, 4, 2, 0, 0}; {-3, 4, 3, -2, 6, -1, 5, -1, 1, 1, 0, 0}; {4, -1, -2, 5, 1, 6, -4, -1, 2, 0, 0, 0}; {1, -5, 5, -1, 6, -2, 0, 2, 3, 2, 0, 0}; {-5, 0, -3, 2, -4, 0, 2, 6, 4, 3, 0, 0}; {-5, 1, -1, 5, 1, 5, -2, 3, 4, 2, 0, 0}; {5, -2, -5, 0, -5, -1, 1, 5, 4, 3, 0, 0}; {6, 0, -2, 4, 0, 5, -4, 1, 2, 1, 0, 0}; {4, -3, 6, -1, 6, -2, 0, 5, 4, 2, 0, 0}; {5, -1, -3, 3, -1, 4, -4, 1, 2, 2, 0, 0}; {1, 4, -1, 2, -5, 3, 1, 6, 5, -1, 0, 0}; {1, 4, -1, 2, -4, 4, 1, 6, 5, -1, 0, 0}; {6, 0, -2, 4, 1, 5, -4, 2, 4, 1, 0, 0}; {4, -2, -4, 2, -1, 3, -5, 1, 3, 1, 0, 0}; {3, -4, 5, -2, 6, -2, 0, 5, 4, 2, 0, 0}; {4, -1, -2, 5, 4, -4, 2, -5, 0, -1, 0, 0}; {4, -1, -2, 5, 4, -3, 2, -4, 0, -1, 0, 0}; {3, -2, -3, 4, 3, -4, 1, -5, -1, -1, 0, 0}; {3, -3, -5, 1, -1, 3, -5, 1, 3, 0, 0, 0}; {3, -3, -5, 1, -1, 3, -5, 2, 4, 1, 0, 0}; {3, -3, -5, 1, -1, 3, -4, 2, 4, 1, 0, 0}; {2, -3, -4, 3, 2, -5, 2, -5, 0, 0, 0, 0}; {-2, 3, 0, 5, 2, -5, -3, 2, 3, 2, 0, 0}; {2, -3, -4, 3, 3, -5, 1, -3, 0, 0, 0, 0}; {2, -3, -4, 3, 3, -4, 1, -3, 0, -1, 0, 0}; {-3, 2, -1, 4, 2, 6, -3, 3, 3, 1, 0, 0}; {3, 3, -5, -5, 1, -4, 3, -4, 2, 3, 0, 0}; {-5, -3, 3, 5, 1, -2, 6, 0, -4, -1, 0, 0}; {4, 5, -2, -1, 6, 3, -3, 3, -1, 1, 0, 0}; {0, -5, 6, 1, 2, -5, 0, -4, 0, -1, 0, 0}; {-2, 4, 2, -4, -4, 0, 5, 0, 2, 0, 0, 0}; {-3, 3, 1, -5, -5, -1, -5, -1, 3, 1, 0, 0}; {-2, -2, 2, 2, -3, 6, -1, 6, 1, 3, 0, 0}; {4, -2, -4, 2, 3, -3, 3, 6, 1, 0, 0, 0}; {-4, 1, -2, 4, 6, -2, -3, 6, 1, 2, 0, 0}; {-3, 2, -1, 5, -4, 0, -4, -4, 2, 1, 0, 0}; {-4, 1, -2, 4, -5, -1, -4, -5, 1, 2, 0, 0}; {-3, 3, 1, -4, 0, 5, 3, 3, -2, 0, 0, 0}; {-3, 3, 1, -4, 0, 5, 3, 4, -1, 0, 0, 0}; {-5, 0, -3, 3, 6, -2, -4, 6, 1, 1, 0, 0}; {6, -1, -4, 2, 5, -3, -4, 5, 0, 1, 0, 0}; {-5, 0, -3, 3, 6, -2, -3, 5, 1, 1, 0, 0}; {5, -2, -5, 1, 4, -4, -4, 5, 1, 0, 0, 0}; {-3, 3, 1, -4, 0, 6, 3, 3, -2, 0, 0, 0}; {-4, 2, 0, -5, -1, 5, 2, 3, -2, 0, 0, 0}; {3, -4, 5, -1, 2, -5, -5, 3, 0, 0, 0, 0}; {2, 5, 0, 4, 6, -5, 4, 1, -5, 3, 0, 0}; {-1, 4, 1, -5, -1, 4, 5, 1, -1, -2, 0, 0}; {3, -4, 5, -1, 4, 6, 6, -5, 6, 4, 0, 0}; {6, -2, 6, -1, 3, 5, -2, -3, 3, 1, 0, 0}; {6, -2, 6, -1, 3, 5, -1, -2, 4, 1, 0, 0}; {5, -3, 5, -2, 2, 4, -2, -3, 3, 1, 0, 0}; {0, 3, -2, 2, 6, 3, 0, 6, 4, -1, 0, 0}; {0, 5, 2, -4, 2, 3, 5, 6, 5, 4, 0, 0}; {-1, 4, 1, -5, 1, 3, 5, 6, 5, 3, 0, 0}; {0, 6, 4, -1, 6, -3, 0, 3, 3, 2, 0, 0}; {5, -4, 3, -5, -1, -1, 2, 0, -5, 3, 0, 0}; {1, -5, 5, 0, -5, -2, 0, 2, 3, 2, 0, 0}; {-1, 6, 5, 1, -3, 2, 6, -3, 0, 0, 0, 0}; {-3, 2, -1, 5, -1, 2, 4, 6, 5, 3, 0, 0}; {-3, 3, 1, -4, 3, -5, -1, 2, 3, 2, 0, 0}; {-5, 1, -1, 6, 1, 5, -2, 3, 3, 3, 0, 0}; {3, -5, 3, -4, 1, 3, -4, -4, 2, 1, 0, 0}; {-5, 0, -3, 3, -3, 1, 3, 6, 5, 3, 0, 0}; {5,-2,-5, 1, -5, -1, 2, 6, 5, 4, 0, 0}; {-2, 1, -4, 0, 5, 2, 0, 5, 4, -1, 0, 0}; {-3, 1, -3, 2, -4, -4, -1, -3, 6, 3, 0, 0}; {-5, 0, -3, 3, -2, 0, 3, 4, 4, 3, 0, 0}; {3, -3, -5, 2, -2, 1, 6, 2, 3, 0, 0, 0}; {3, -5, 3, -4, 2, 4, 6, -4, 5, 4, 0, 0}; {4, -3, 6, 0, -5, -2, 1, 6, 6, 3, 0, 0}; {3, -4, 5, -1, 6, -3, 0, 6, 6, 2, 0, 0}; {2, 6, 2, -5, 1, 4, 6, -3, 6, 4, 0, 0}; {3, -4, 5, -1, 6, -2, 1, 5, 4, 3, 0, 0}; {2, -5, 4, -2, 5, -3, 0, 4, 3, 2, 0, 0}; {3, -3, -5, 2, -2, 3, -4, 1, 3, 2, 0, 0}; {1, 5, 1, 6, 1, 3, 5, -5, 5, 4, 0, 0}; {2, -4, 6, 1, -2, 3, -5, 1, 3, 1, 0, 0}; {0, 6, 4, -1, -4, 1, 6, -1, 2, 1, 0, 0}; {-1, 5, 3, -2, -4, 0, 6, -1, 2, 1, 0, 0}; {-2, 2, -2, 3, -1, 2, 2, -1, 6, 6, 0, 0}; {-1, 3, -1, 4, 0, 3, 3, 0, 6, 6, 0, 0}; {-3, 3, 1, -4, -5, -1, 4, -3, 1, 0, 0, 0}; {-4, 2, 0, -5, 6, -1, 4, -2, 1, 0, 0, 0}; {5, -2, -5, 1, -1, 4, -5, 0, 2, 1, 0, 0}; {4, -4, 4, -3, 6, -1, 0, 5, 4, 2, 0, 0}; {4, -3, 6, 0, -1, 5, 6, 0, 2, 0, 0, 0}; {1, 4, -1, 3, 0, 4, 4, -3, 6, 3, 0, 0}; {2, 2, 6, -5, 1, -3, 3, -4, 2, 2, 0, 0}; {5, -1, -3, 4, 4, -2, 2, -4, 0, -1, 0, 0}; {-1, 2, -3, 2, -1, 3, 3, -5, 5, 3, 0, 0}; {-1, 2, -3, 2, -1, 3, 4, -4, 5, 3, 0, 0}; {-3, 0, -5, 0, -3, 2, 1, 6, 5, 2, 0, 0}; {5, -5, 1, 5, 3, -5, 4, -4, -5, 4, 0, 0}; {6, -5, 0, 3, 1, -4, 1, -2, -2, 3, 0, 0}; {6, 0, -2, 6, -2, 3, 2, -3, 0, 0, 0, 0}; {6, 0, -2, 6, -2, 3, 2, 3, -3, 1, 0, 0}; {3, -5, 3, -3, 0, 3, -2, -3, 3, 1, 0, 0}; {-3, 1, -3, 3, 6, -2, -3, 5, 1, 0, 0, 0}; {1, 3, -3, 1, 2, -2, 5, -3, 6, 0, 0, 0}; {-2, 0, 6, -2, 0, -4, 4, -3, 6, 0, 0, 0}; {2, 6, 2, -4, 0, 2, -4, -4, 2, 0, 0, 0}; {2, 6, 2, -4, 0, 3, -4, -4, 2, 0, 0, 0}; {-1, 1, -5, -1, 1, -4, 4, -3, 6, 0, 0, 0}; {3, -4, 5, 0, 5, 3, 5, -4, 5, 5, 0, 0}; {-3, -1, 5, -3, 0, -4, 3, -3, 5, 1, 0, 0}; {-3, -1, 5, -3, 0, -4, 4, -4, 6, 0, 0, 0}; {-3, -1, 5, -3, 0, -4, 4, -3, 6, 1, 0, 0}; {-4, -2, 4, -4, -1, -5, 4, -4, 6, 0, 0, 0}; {-5, 1, -1, -5, 2, 6, -2, 1, 2, 2, 0, 0}; {5, -2, -5, 2, -4, -1, 2, 5, 4, 3, 0, 0}; {0, 3, -2, 3, -5, -4, 0, -1, 5, 2, 0, 0}; {1, 5, 1, -5, 0, 2, -4, -5, 2, 0, 0, 0}; {2, -5, 4, -1, 5, -3, 2, 5, 5, 4, 0, 0}; {1, 5, 1, -5, 0, 4, 5, 0, -2, -4, 0, 0}; {6, -4, 2, 6, -2, 6, 3, -4, 6, 0, 0, 0}; {-4, 1, -2, 5, 0, 1, 3, 5, 4, 3, 0, 0}; {5, -3, 5, -1, 5, 5, -5, -4, 6, 5, 0, 0}; {-2, 1, -4, 1, 6, 6, -1, -2, 4, 1, 0, 0}; {-2, 1, -4, 1, 6, -5, -1, -2, 4, 1, 0, 0}; {-1, 3, -1, 5, -1, 3, 3, 0, 5, 5, 0, 0}; {0, 3, -2, 3, -3, -4, -1, -2, -5, 6, 0, 0}; {2, 6, 2, -4, 3, 4, 6, -5, 5, 4, 0, 0}; {-1, 2, -3, 2, -4, -4, -2, -2, -5, 5, 0, 0}; {-1, 2, -3, 2, -4, -4, -2, -2, -5, 6, 0, 0}; {0, 4, 0, 6, 1, 2, 6, 6, 4, 5, 0, 0}; {-4, -2, 4, -4, 1, 0, 3, 1, -5, 3, 0, 0}; {-3, 1, -3, 3, -2, 2, 2, -1, 5, 5, 0, 0}; {6, -3, 4, -3, 4, 1, -1, 0, -4, -4, 0, 0}; {3, 6, 1, 6, 2, 5, 4, 1, -5, -5, 0, 0}; {-2, 1, -4, 2, 1, -3, 4, 3, 5, -1, 0, 0}; {6, -4, 2, -5, 6, 1, -5, 6, 6, 0, 0, 0}; {-5, -2, 5, -1, -1, -5, 2, 3, 3, -2, 0, 0}; {-3, -2, 3, -5, 6, 2, -3, 0, -4, 1, 0, 0}; {-3, -1, 5, -2, -1, -4, 4, -4, 6, 0, 0, 0}; {5, 5, -3, 0, -1, -5, 1, 3, -1, 4, 0, 0}; {1, 5, 1, -4, -1, 5, 6, 1, -1, -3, 0, 0}; {-4, -2, 4, -3, -1, -5, 3, -4, 5, 0, 0, 0}; {-2, 1, -4, 2, 5, -5, 0, -1, 4, 1, 0, 0}; {-2, 1, -4, 2, 5, -5, 0, -1, 5, 1, 0, 0}; {-3, -1, 5, -2, 1, -1, 4, 2, 6, 4, 0, 0}; {-4, -1, 6, 0, 4, 5, -1, -2, 4, 1, 0, 0}; {-3, 0, -5, 1, 5, -5, -1, -2, 4, 1, 0, 0}; {6, -2, 6, 1, -5, 5, -5, -3, 5, 5, 0, 0}; {4, -4, 4, -1, 5, 4, 6, -4, 5, 5, 0, 0}; {3, -5, 3, -2, 4, 4, 6, -5, 5, 5, 0, 0}; {-2, 1, -4, 2, -5, -5, -1, -2, 4, 2, 0, 0}; {2, 5, 0, 6, 0, -2, -2, -1, -5, -5, 0, 0}; {5, -4, 3, -3, 3, 1, -2, -1, -4, -4, 0, 0}; {6, -4, 2, -5, 0, -1, 2, 1, 6, 3, 0, 0}; {5, -5, 1, -5, 5, 0, -5, 5, 6, 0, 0, 0}; {-2, -5, -4, -3, 5, -2, 3, 0, 6, -5, 0, 0}; {4, 6, 0, 6, -4, 4, -1, 5, 2, -2, 0, 0}; {5, -5, 1, -5, -3, 5, 1, 6, 4, -1, 0, 0}; {1, 1, 5, -3, -3, 4, -2, 1, -4, 2, 0, 0}; {2, 5, 0, -5, 0, 5, 5, 1, -1, -3, 0, 0}; {2, 4, -2, 4, -4, -3, 1, 0, 5, 2, 0, 0}; {3, 6, 1, -4, 2, 1, -4, -4, 0, 2, 0, 0}; {6, -3, 4, -1, 5, 5, -3, -3, 3, 1, 0, 0}; {-2, -1, 4, -2, -3, 3, -3, 6, -4, 2, 0, 0}; {3, 5, -1, 6, -4, 3, -1, 3, 1, -3, 0, 0}; {-2, -1, 4, -1, -5, -1, -5, -3, -5, 6, 0, 0}; {-5, -5, -1, 5, 3, -5, 1, -3, -2, 3, 0, 0}; {4, 3, 6, -1, -3, 0, 5, -1, -1, 5, 0, 0}; {-5, -5, -1, 6, -2, -4, 2, 6, -5, 4, 0, 0}; {3, 3, -5, 2, 1, 5, -1, -5, -3, 3, 0, 0}; {-5, 5, -4, 1, -1, 1, 6, -1, -1, 5, 0, 0}; {-3, -4, 0, -5, 5, -3, 1, -5, -3, 3, 0, 0}; {-4, -5, -1, 6, 4, -4, 1, -5, -3, 3, 0, 0}; {-5, 3, 4, -3, 3, 0, 5, -3, -3, 1, 0, 0}; {2, -2, -1, 4, -1, -2, 4, -4, 6, -1, 0, 0}; {-2, -5, -3, 3, 0, 2, -4, 2, 1, -4, 0, 0}; {3, -1, 0, 6, -1, -4, 2, -4, -4, -1, 0, 0}; {-4, 0, -3, -1, 3, -4, -4, -2, 6, 3, 0, 0}; {6, 3, 5, 0, 5, 3, -2, 5, 6, -2, 0, 0}; {3, 0, 2, -2, 3, 0, -3, 4, 6, -3, 0, 0}; {2, -2, -1, 6, -2, -5, 2, -5, -4, -2, 0, 0}; {0, 6, 5, -2, 0, -5, 0, 4, 1, 0, 0, 0}; {0, -5, -5, 1, 4, 0, 6, -1, -2, -1, 0, 0}; {2, -2, -1, 6, -2, -5, 2, -4, -4, -1, 0, 0}; {1, -3, -2, 5, -3, 6, 1, -5, -5, -2, 0, 0}; {1, -3, -2, 5, -3, 6, 1, -5, -4, -2, 0, 0}; {0, -5, -5, 1, 4, 0, -5, -1, -3, -2, 0, 0}; {1, -3, -2, 5, -3, -5, 2, -5, -4, -2, 0, 0}; {-1, 6, 6, 0, 3, 0, 6, -1, -2, -2, 0, 0}; {-1, 6, 6, 0, 3, 0, 6, -1, -2, -1, 0, 0}; {-1, 6, 6, 0, 3, 1, -5, -1, -2, 0, 0, 0}; {-3, 4, 4, -2, 1, 3, -2, -4, -2, 0, 0, 0}; {-3, 5, 6, 1, 5, -3, 5, 4, -5, -3, 0, 0}; {5, 0, 0, 6, -3, 2, -3, 6, -2, -1, 0, 0}; {1, -5, 6, -1, 2, -5, -5, 4, -1, 1, 0, 0}; {-3, 4, 4, -2, 2, -2, 4, -2, -2, -2, 0, 0}; {0, -4, -3, 4, -3, 6, 1, 6, -4, -2, 0, 0}; {-2, 4, 3, -4, -1, 6, -1, 3, 1, 0, 0, 0}; {-2, 5, 5, -1, 3, -1, 5, -2, -2, -1, 0, 0}; {-1, -5, -4, 3, -4, 5, 0, 6, -5, -3, 0, 0}; {-1, -5, -4, 3, -4, 5, 0, 6, -4, -2, 0, 0}; {-2, 6, -5, 2, -5, 4, 0, 5, -4, -3, 0, 0}; {-3, 3, 2, -5, -2, 6, -1, 2, 1, 1, 0, 0}; {-3, 4, 4, -2, 2, -1, 5, -3, -1, -1, 0, 0}; {-2, 5, 5, -1, 4, 0, 5, -2, -2, -1, 0, 0}; {3, -3, -4, 1, -5, 3, 1, 0, -3, -1, 0, 0}; {4, -4, 5, -4, 2, 6, 6, -3, 6, 4, 0, 0}; {2, -4, -5, 0, -2, 2, 6, 0, 3, 1, 0, 0}; {-5, 5, -4, 5, -4, 2, -2, 0, 4, 6, 0, 0}; {-5, 1, 0, 5, 4, -2, 4, -5, 2, 1, 0, 0}; {-3, 4, 4, -2, -2, 5, 0, 4, 0, -1, 0, 0}; {3, -3, -4, 1, 1, -4, 2, 6, 1, 1, 0, 0}; {2, -3, -3, 3, 5, 1, -4, 0, -2, -2, 0, 0}; {3, -1, 0, -5, -2, -5, 2, -4, -4, -2, 0, 0}; {0, -4, -3, 4, -5, -1, 6, 5, -4, -2, 0, 0}; {0, -4, -3, 4, -5, -1, -5, 5, -4, -3, 0, 0}; {-2, 5, 5, -1, 1, 4, -1, -4, -1, 0, 0, 0}; {-1, -5, -4, 3, 6, -1, 6, 4, -3, -2, 0, 0}; {2, -3, -3, 4, 6, 1, -5, 4, -3, -1, 0, 0}; {-1, 5, 4, -2, -1, 6, 0, 4, 0, 0, 0, 0}; {-1, 6, 6, 1, 3, -1, -5, 0, -2, -1, 0, 0}; {5, -3, 6, -2, -3, 4, -4, -4, 6, 4, 0, 0}; {0, 6, 5, -1, 1, 6, 0, -4, -1, 0, 0, 0}; {-1, -4, -2, -5, 0, -2, -5, 2, 5, -4, 0, 0}; {-3, 5, 6, 2, 6, 3, 0, 6, -4, -3, 0, 0}; {-5, 2, 2, -3, 0, -4, 4, -3, -1, -2, 0, 0}; {-3, 5, 6, 2, 6, 4, 0, 6, 6, -3, 0, 0}; {-5, 2, 2, -3, 0, -3, 4, -3, -3, -2, 0, 0}; {6, 0, -1, 5, -5, 3, -3, 1, 0, -1, 0, 0}; {5, -1, -2, 4, 6, 2, -4, 0, 0, -1, 0, 0}; {6, 1, 1, -4, -1, -4, 4, -4, -2, -3, 0, 0}; {5, 0, 0, -5, -2, -5, 3, -5, -2, -3, 0, 0}; {3, 6, 2, 5, 4, -2, 2, -1, -4, 6, 0, 0}; {3, -5, 4, -4, -4, 4, -2, 1, 4, 4, 0, 0}; {2, -4, -5, 1, 3, -5, 1, -3, 0, 0, 0, 0}; {3, -2, -2, 5, -4, 1, -4, 5, -3, -2, 0, 0}; {-5, 2, 2, -3, 1, -4, 4, -2, -1, -2, 0, 0}; {-3, 5, 6, 2, -5, 4, -2, 5, 6, -3, 0, 0}; {-4, 3, 3, -2, 2, -2, 4, -2, -3, -2, 0, 0}; {-4, 4, 5, 1, 6, 3, -1, 5, -5, -2, 0, 0}; {6, 1, 1, -4, 0, -4, 4, -3, -1, -2, 0, 0}; {5, 0, 0, -5, -1, -4, 3, -5, -2, -2, 0, 0}; {-4, 1, -1, 4, -5, -1, -3, -5, 1, 2, 0, 0}; {-5, 0, -2, 3, 6, -2, -3, 6, 1, 1, 0, 0}; {-5, 3, 4, 0, -5, 1, 5, 6, -1, -2, 0, 0}; {4, -3, -5, 0, 4, -3, -5, 5, 0, 1, 0, 0}; {5, 0, 0, -5, 2, -5, -3, -1, 2, 0, 0, 0}; {3, -1, 0, -4, 4, -1, 3, 6, -2, -1, 0, 0}; {3, -2, -2, 5, 1, 5, -4, -1, 1, 0, 0, 0}; {-1, 6, 6, 1, -3, 3, 6, -3, 0, 0, 0, 0}; {3, -4, 6, -1, 6, -3, 1, 6, 5, 2, 0, 0}; {3, -4, 6, -1, 6, -3, 1, 6, 5, 3, 0, 0}; {2, -5, 5, -2, 5, -4, 0, 6, 4, 2, 0, 0}; {2, -5, 5, -2, 5, -3, 0, 5, 3, 2, 0, 0}; {1, 5, 2, 6, 0, 3, 5, -3, -5, 4, 0, 0}; {2, -5, 5, -2, 6, -4, -1, 6, 6, 4, 0, 0}; {1, 6, 4, -3, 5, -4, -1, 5, 6, 3, 0, 0}; {0, 4, 1, 5, 0, 2, 4, -3, -5, 4, 0, 0}; {1, -4, -4, 3, 1, 6, 0, -4, -1, -1, 0, 0}; {-1, 5, 4, -2, -5, -1, 4, 0, 1, -1, 0, 0}; {0, 5, 3, -4, 4, -5, 0, 5, 5, 2, 0, 0}; {1, -5, 6, 0, -3, 2, 6, 0, 1, 0, 0, 0}; {1, 6, 4, -3, 5, -3, 0, 5, 3, 2, 0, 0}; {-1, 3, 0, 4, -1, 2, 4, -4, 5, 3, 0, 0}; {-2, 2, -1, 3, -2, 1, 3, -4, 6, 3, 0, 0}; {-1, 4, 2, -5, 3, -5, -2, 4, 3, 1, 0, 0}; {-1, 4, 2, -5, 3, -5, -1, 4, 4, 2, 0, 0}; {0, 6, 5, -1, -4, 1, 6, 0, 2, 1, 0, 0}; {-1, 5, 4, -2, -5, 0, 5, -1, 1, 1, 0, 0}; {-2, 2, -1, 3, -2, 2, 3, -5, 5, 3, 0, 0}; {-2, 2, -1, 3, -1, 1, 3, -3, -5, 4, 0, 0}; { 0, 6, 5, -1, -3, 1, 6, 1, 2, 1, 0, 0}; {0, 6, 5, -1, -3, 1, 6, 1, 3, 1, 0, 0}; {-1, 5, 4, -2, -4, 0, 5, 0, 2, 0, 0, 0}; {-1, 6, 6, 1, 0, 5, 0, 5, -1, -1, 0, 0}; {-1, 5, 4, -2, -4, 0, 6, 0, 2, 0, 0, 0}; {-1, 5, 4, -2, -4, 0, 6, 0, 2, 1, 0, 0}; {0, -5, -5, 2, 1, 6, 1, -4, 0, 0, 0, 0}; {-2, 4, 3, -3, -5, 0, 4, -2, 1, 0, 0, 0}; {-3, 2, 0, 5, 2, 6, -3, 3, 3, 1, 0, 0}; {-3, 2, 0, 5, 2, 6, -3, 3, 4, 1, 0, 0}; {-4, 1, -1, 4, 1, 5, -4, 2, 3, 1, 0, 0}; {-2, 4, 3, -3, -4, 0, 5, 0, 2, 0, 0, 0}; {-2, 5, 5, 0, 0, 5, -1, -5, -1, -1, 0, 0}; {-3, 4, 4, -1, -1, 4, -2, -5, -2, -1, 0, 0}; {-3, 3, 2, -4, -5, -1, 5, -1, 2, 0, 0, 0}; {-2, 5, 5, 0, 0, 5, 0, -5, -1, -1, 0, 0}; {-3, 3, 2, -4, -5, -1, 5, 0, 2, 0, 0, 0}; {-4, 2, 1, -5, 6, -2, 4, -1, 1, 0, 0, 0}; {-4, 2, 1, -5, 6, -1, 4, -1, 2, 0, 0, 0}; {-5, -1, -4, 0, -2, 5, -3, -3, 6, 4, 0, 0}; {0, -3, -1, -4, -1, 5, 1, 1, 6, -4, 0, 0}; {-4, 3, 3, -2, -1, 3, -2, -5, -2, -1, 0, 0}; {-4, 3, 3, -2, -1, 4, -2, 6, -2, -2, 0, 0}; {-4, 3, 3, -2, -1, 4, -2, -5, -2, -1, 0, 0}; {-5, 2, 2, -3, -2, 3, -2, 6, -2, -1, 0, 0}; {4, -2, -3, 3, 3, -4, 1, -3, 0, 1, 0, 0}; {2, -4, -5, 1, 1, -5, 1, 5, 0, 0, 0, 0}; {0, 6, 5, 0, 0, -5, 0, -5, -1, -1, 0, 0}; {1, 4, 0, 4, 1, 1, -3, 5, 4, -4, 0, 0}; {2, -5, 5, -1, -2, 2, -5, 1, 3, 0, 0, 0}; {-3, 2, 0, 6, 6, 0, 4, -4, 2, 0, 0, 0}; {4, -4, 5, -2, 0, 3, 0, -3, 3, 3, 0, 0}; {4, -3, -5, 1, 5, -2, 6, 5, 0, 0, 0, 0}; {3, -4, 6, 0, 4, -3, 6, 5, 0, 1, 0, 0}; {3, -2, -2, 6, 1, 5, -3, -3, 0, -3, 0, 0}; {6, 2, 3, 0, -4, 1, 5, -5, -1, -3, 0, 0}; {0, 5, 3, -3, 3, -5, 1, 4, 5, 3, 0, 0}; {-3, 3, 2, -3, 5, -5, -1, 1, 2, 0, 0, 0}; {-1, 5, 4, -1, -5, -2, 4, 1, 2, -1, 0, 0}; {0, 5, 3, -3, 4, -5, 0, 5, 4, 3, 0, 0}; {-1, 5, 4, -1, -5, -1, 5, 0, 1, 0, 0, 0}; {-2, 1, -3, 1, 6, -5, 0, -2, 5, 1, 0, 0}; {1, 6, 4, -2, 5, -3, 0, 4, 3, 2, 0, 0}; {-1, 3, 0, 5, -1, 2, 4, -4, 6, 4, 0, 0}; {0, 5, 3, -3, 4, -4, 0, 4, 4, 2, 0, 0}; {1, -5, 6, 1, -3, 2, -5, 0, 1, 1, 0, 0}; {0, 5, 3, -3, 4, -4, 0, 4, 3, 3, 0, 0}; {0, 5, 3, -3, 4, -4, 0, 5, 4, 3, 0, 0}; {-1, 4, 2, -4, 3, -5, -1, 4, 4, 2, 0, 0}; {-3, 1, -2, 3, -3, 1, 3, -5, 5, 3, 0, 0}; {-3, 1, -2, 3, -3, 2, 3, -5, 5, 3, 0, 0}; {-3, 0, -4, 0, 6, -5, -3, -2, -5, 5, 0, 0}; {-2, 3, 1, -5, 3, 6, -2, 4, 5, 2, 0, 0}; {-2, 3, 1, -5, 3, 6, -2, 4, 5, 3, 0, 0}; {-3, 2, 0, 6, 2, 5, -2, 3,

4, 2, 0, 0}; {-2, 4, 3, -2, -5, -1, 5, -1, 1, 1, 0, 0}; {-3, 2, 0, 6, 2, 6, -2, 4, 5, 2, 0, 0}; {-5, 0, -2, 4, 1, 4, -3, 3, 4, 1, 0, 0}; {-4, 2, 1, -4, 6, -2, 4, -1, 1, 1, 0, 0}; {-4, 2, 1, -4, 6, -1, 4, -2, 1, 0, 0, 0}; {-5, 1, 0, -5, 5, -2, 3, -3, 0, 0, 0, 0}; {-5, 1, 0, -5, 5, -2, 3, -3, 1, 0, 0, 0}; {-5, 1, 0, -5, 5, -2, 4, -3, 1, 0, 0, 0}; {5, -3, 6, -1, -5, -1, 1, 6, 4, 2, 0, 0}; {6, 0, -1, 6, 4, -2, 3, -2, 1, 0, 0, 0}; {4, -4, 5, -2, 6, -1, 0, 5, 4, 2, 0, 0}; {5, -1, -2, 5, 4, -4, 2, -5, 0, 0, 0, 0}; {5, -1, -2, 5, 4, -3, 2, -4, 0, -1, 0, 0}; {1, -5, 6, 2, 1, -5, 0, 6, -1, -1, 0, 0}; {2, 6, 3, -3, -2, 1, 0, -4, 2, 3, 0, 0}; {2, -5, 5, 0, 3, -5, 6, 5, -1, 2, 0, 0}; {-3, 0, -4, 1, 4, 6, 0, -1, 5, 1, 0, 0}; {-4, -1, -5, 0, 4, 6, -1, -2, 4, 1, 0, 0}; {3, 4, -2, 1, 4, -1, -5, -1, -4, 2, 0, 0}; {5, -5, 2, 6, -2, -2, 3, 1, -5, 2, 0, 0}; {6, -3, 5, -2, 4, 6, -5, -3, 6, 5, 0, 0}; {4, -5, 3, -4, 2, 5, 6, -3, 6, 4, 0, 0}; {4, -2, -3, 5, 3, -4, 2, -4, 0, 0, 0, 0}; {-3, 0, -4, 2, 0, 6, 0, 3, 5, 3, 0, 0}; {5, -5, 2, -5, -3, 5, 0, 6, 4, -2, 0, 0}; {4, 6, 1, 6, -4, 4, 0, 6, 4, -2, 0, 0}; {3, 4, -2, 2, 3, -1, 6, -2, -5, 1, 0, 0}; {2, 3, -3, 1, 3, -2, 5, -2, 6, 1, 0, 0}; {1, 2, -4, 0, 2, -3, 4, -3, 6, 0, 0, 0}; {5, -5, 2, -5, 0, -4, 3, 1, 5, 5, 0, 0}; {-3, -2, 4, -2, -5, -1, 6, -4, -5, 6, 0, 0}; {3, 5, 0, -5, -4, 4, -1, 3, 2, -3, 0, 0}; {1, 1, 6, 0, -1, 4, -2, -5, -3, 2, 0, 0}; {-5, 6, -2, 3, 2, -5, 1, -3, -2, 4, 0, 0}; {3, 1, 4, -4, 6, -1, 4, 0, 0, 5, 0, 0}; {2, -2, 0, 6, -2, -4, 2, -4, -4, 0, 0, 0}; {3, 1, 5, 1, -5, 3, 5, -3, 4, 5, 0, 0}; {0, -3, 0, -5, 1, -5, -4, -1, -5, -5, 0, 0}; {-3, 5, -5, 1, 6, 0, 0, 2, -3, -4, 0, 0}; f-4, 5, -4, 3, -2, -4, 2, 4, -4, 0, 0, 0}; {5, 2, 5, 0, 4, -1, -2, 4, -4, -3, 0, 0}; {3, -2, -1, 4, 6, 1, -4, 3, -1, 0, 0, 0}; {0, -5, -4, 2, 4, -1, -5, 1, -2, 0, 0, 0}; {-1, 5, 5, -2, -1, 6, 0, 4, 1, 0, 0, 0}; {-1, 6, -5, 1, 3, -1, 3, -1, -4, -1, 0, 0}; {-1, 6, -5, 1, 3, 0, 6, -1, -2, 0, 0, 0}; {6, 1, 2, -4, -2, 2, -2, 6, -1, -1, 0, 0}; {0, -3, 0, -4, 1, -2, -4, 4, 6, -3, 0, 0}; {-3, 4, 5, -1, 2, -2, 4, -1, -3, -1, 0, 0}; {-3, 4, 5, -1, 2, -2, 5, -2, -3, -1, 0, 0}; {-2, 6, -4, 3, -5, 4, 0, 6, -5, -2, 0, 0}; {-3, 4, 5, -1, 2, -2, 5, -1, -3, -1, 0, 0}; {-2, 6, -4, 3, -5, 4, 0, -5, -5, -2, 0, 0}; {-3, 6, -3, 5, -1, -5, -5, 3, 6, -4, 0, 0}; {-4, 5, -4, 4, -2, -5, 6, 3, 6, -4, 0, 0}; {-5, 2, 3, -3, 1, -3, 3, -2, -3, -2, 0, 0}; {-5, 2, 3, -3, 1, -3, 4, -2, -3, -2, 0, 0}; {-4, 4, 6, 1, 6, 3, -1, 6, -5, -2, 0, 0}; {-5, 3, 5, 0, 5, 2, -2, 5, -5, -3, 0, 0}; {-5, 3, 5, 0, 5, 2, -1, 5, 6, -2, 0, 0}; {5, 1, 3, -2, 3, 0, -2, 6, -4, -3, 0, 0}; {5, -1, -1, 4, -5, 3, -3, 1, -1, -1, 0, 0}; {-4, 2, 2, -5, -1, 5, 5, 2, -2, 0, 0, 0}; {-5, 2, 3, -3, 2, -1, 4, -3, -3, 0, 0, 0}; {-5, 2, 3, -3, 2, -1, 5, -3, -2, 0, 0, 0}; {-3, 1, -1, 2, 5, 1, -4, 5, 3, 4, 0, 0}; {1, -3, -1, 6, 3, -1, 2, 5, -2, -2, 0, 0}; {-1, -5, -3, 4, 2, -1, 1, 4, -2, -3, 0, 0}; {-3, 2, 1, 6, 5, -1, 4, -5, 2, 1, 0, 0}; {-2, 4, 4, -2, -2, 5, 0, 4, 0, 0, 0, 0}; {-3, 3, 3, -3, -3, 5, -1, 3, 0, 0, 0, 0}; {-5, 0, -1, 4, 3, -2, 3, 6, 2, 1, 0, 0}; {-5, 0, -1, 4, 3, -2, 3, 6, 3, 2, 0, 0}; {-4, 2, 2, -4, -4, 4, -2, 2, 0, 0, 0, 0}; {5, -3, -5, -1, -3, 4, -4, -3, 5, 3, 0, 0}; {6, -1, -2, 3, 2, -2, 3, 6, 2, 2, 0, 0}; {-5, 3, 5, 1, 3, -4, 4, 3, -5, -3, 0, 0}; {6, 1, 2, -3, -2, 2, -3, 6, -2, -2, 0, 0}; {4, -2, -2, 4, 4, -4, 2, -2, 0, 0, 0, 0}; {5, 0, 1, -4, -3, 2, -3, 6, -3, -2, 0, 0}; {5, 0, 1, -4, -3, 2, -3, 6, -2, -1, 0, 0}; {3, -3, -3, 3, 3, -5, 1, -3, 0, 0, 0, 0}; {2, -4, -4, 2, 2, -5, 0, -4, 0, 0, 0, 0}; {3, -2, -1, 6, -5, 1, -4, 5, -2, -1, 0, 0}; {-4, 2, 2, -4, -3, 3, -1, 4, 0, 1, 0, 0}; {-5, 0, -1, 4, 4, -2, 3, -5, 2, 1, 0, 0}; {-5, 1, 1, -5, -4, 3, -3, 2, -1, 0, 0, 0}; {-4, 2, 2, -4, -3, 4, -1, 4, 0, 0, 0, 0}; {-5, 1, 1, -5, -4, 3, -2, 3, -1, 0, 0, 0}; {-5, 1, 1, -5, -4, 3, -2, 3, 0, 1, 0, 0}; {-5, 1, 1, -5, -4, 4, -2, 2, 0, -1, 0, 0}; {-5, 2, 3, -2, 0, -3, 4, -3, -3, -2, 0, 0}; {6, 0, 0, 6, -5, 3, -3, 2, -1, 0, 0, 0}; {-4, 3, 4, -1, 1, -2, 6, -1, -3, -2, 0, 0}; {5, 0, 1, -4, -2, 2, -3, 6, -2, -2, 0, 0}; {6, 2, 4, 0, 3, -4, 4, 3, -5, -4, 0, 0}; {4, -1, 0, -5, -3, 1, -3, 6, -3, -3, 0, 0}; {6, 1, 2, -3, 0, -4, 4, -2, -3, -1, 0, 0}; {4, -2, -2, 4, 6, 1, -4, 1, 0, 0, 0, 0}; {6, 1, 2, -3, 0, -3, 3, -3, -4, -1, 0, 0}; {6, 1, 2, -3, 0, -3, 4, -3, -3, -1, 0, 0}; {5, 0, 1, -4, -1, -4, 3, -4, -3, -2, 0, 0}; {5, -1, -1, 5, -5, 3, -3, 2, -1, -1, 0, 0}; {4, -2, -2, 4, 6, 2, -4, 1, -1, -1, 0, 0}; {3, -3, -3, 3, 5, 1, -5, 0, -1, -1, 0, 0}; {4, -1, 0, -5, -2, -5, 2, -4, -4, -1, 0, 0}; {5, -1, -1, 5, -5, 3, -2, 2, -1, 0, 0, 0}; {5, 0, 1, -4, -1, -4, 4, -3, -4, -3, 0, 0}; {5, 0, 1, -4, -1, -4, 4, -3, -4, -2, 0, 0}; {5, 0, 1, -4, -1, -3, 4, -3, -4, -2, 0, 0}; {6, 3, 6, 3, -3, 6, 5, 1, 5, -4, 0, 0}; {2, -3, -2, 5, -3, 5, 2, -4, -2, -2, 0, 0}; {4, -1, 0, -5, -1, -4, 2, -4, -4, -1, 0, 0}; {4, -1, 0, -5, -1, -4, 3, -4, -3, -1, 0, 0}; {2, -4, -4, 2, 5, 1, -5, 0, -2, -2, 0, 0}; {3, -2, -1, 6, -2, -5, 2, -4, -4, -3, 0, 0}; {3, -2, -1, 6, -2, -5, 2, -4, -4, -2, 0, 0}; {4, 0, 2, -2, 3, 1, -3, 4, 6, -3, 0, 0}; {1, -4, -3, 4, -4, 5, 1, 6, -3, -2, 0, 0}; {-5, 1, 1, -5, -1, 4, 4, 2, -2, -1, 0, 0}; {3, -3, -3, 3, -4, 3, 1, 0, -3, -1, 0, 0}; {0, 5, 4, -3, 1, -5, 5, 3, -1, 1, 0, 0}; {0, -5, -4, 3, -1, 5, -5, -3, 1, -1, 0, 0}; {-3, 3, 3, -3, 4, -3, -1, 0, 3, 1, 0, 0}; {5, -1, -1, 5, 1, -4, -4, -2, 2, 1, 0, 0}; {-1, 4, 3, -4, 4, -5, -1, 6, 3, 2, 0, 0}; {-4, 0, -2, 2, -3, -1, 3, -4, 6, 3, 0, 0}; {-3, 2, 1, 6, 2, 5, -2, 4, 4, 2, 0, 0}; {-3, 2, 1, 6, 2, 5, -2, 4, 4, 3, 0, 0}; {-2, 4, 4, -2, -5, -1, 5, 0, 2, 2, 0, 0}; {-4, 1, 0, 5, 1, 4, -3, 4, 3, 1, 0, 0}; {-2, 3, 2, -5, 3, -5, -2, 4, 2, 2, 0, 0}; {-5, 0, -1, 4, 1, 3, -4, 3, 4, 2, 0, 0}; {-5, 0, -1, 4, 1, 4, -4, 3, 4, 2, 0, 0}; {-5, 0, -1, 4, 1, 4, -4, 3, 4, 3, 0, 0}; {-5, 1, 1, -5, 5, -3, 2, -2, 1, 0, 0, 0}; {-4, 1, 0, 5, 2, 5, -2, 4, 4, 1, 0, 0}; {-3, 3, 3, -3, -5, -1, 5, 0, 1, 1, 0, 0}; {-5, 0, -1, 4, 1, 4, -3, 3, 4, 2, 0, 0}; {-5, 0, -1, 4, 1, 4, -3, 4, 3, 2, 0, 0}; {6, -1, -2, 3, 0, 3, -4, 3, 3, 1, 0, 0}; {6, -1, -2, 3, 0, 3, -3, 3, 4, 1, 0, 0}; {6, -1, -2, 3, 0, 4, -4, 2, 3, 1, 0, 0}; {-4, 1, 0, 5, 3, -1, 3, 6, 3, 3, 0, 0}; {-5, 0, -1, 4, 2, -2, 3, 6, 2, 2, 0, 0}; {6, -2, -4, 0, -3, 4, -4, -3, 5, 4, 0, 0}; {6, 0, 0, 6, 5, -3, 2, -4, 1, 0, 0, 0}; {6, 0, 0, 6, 5, -3, 2, -3, 1, 0, 0, 0}; {4, -3, -4, 1, -1, 2, 6, 1, 3, 2, 0, 0}; {5, -2, -3, 2, 0, 3, -4, 3, 3, 2, 0, 0}; {5, -1, -1, 5, 4, -4, 2, -2, 0, 1, 0, 0}; {5, -1, -1, 5, 4, -3, 2, -3, 0, -1, 0, 0}; {5, -1, -1, 5, 4, -3, 2, -3, 1, 0, 0, 0}; {4, -2, -2, 4, 3, -4, 1, -4, 0, 0, 0, 0}; {5, -1, -1, 5, 4, -3, 3, -2, 1, 0, 0, 0}; {5, 0, 1, -4, -4, 2, -3, 5, -2, -1, 0, 0}; {4, -2, -2, 4, 3, -3, 1, -4, 0, -1, 0, 0}; {0, 5, 4, -2, -4, 1, 5, -1, 2, 0, 0, 0}; {6, -1, -2, 4, 2, -2, 2, 6, 1, 1, 0, 0}; {1, 6, 5, -1, -3, 0, 6, 1, 2, 0, 0, 0}; {1, 6, 5, -1, -3, 1, -3, 1, 4, 1, 0, 0}; {1, -5, -5, 2, 1, 6, 0, -4, -1, 0, 0, 0}; {1, 5, 3, -4, -2, 1, -1, -4, 2, 3, 0, 0}; {-1, 3, 1, 6, -3, 1, -2, -5, 2, 2, 0, 0}; {3, -1, 1, -2, -5, -1, 4, -5, -3, -4, 0, 0}; {4, 5, 0, 2, 4, 3, -3, 6, -2, 5, 0, 0}; {5, -2, -3, 3, -2, 1, -5, 3, 2, 0, 0, 0}; {5, -2, -3, 3, -2, 1, -4, 3, 3, 0, 0, 0}; {3, 4, -1, 1, 4, 3, -4, 5, -2, 4, 0, 0}; {4, -2, -2, 5, 1, -5, -5, -2, 2, 0, 0, 0}; {-5, 1, 1, -4, 5, -3, 3, -1, 1, 1, 0, 0}; {-5, -1, -3, 2, -3, 0, 2, 6, 4, 3, 0, 0}; {5, -3, -5, 0, -5, -2, 1, -5, 6, 2, 0, 0}; {5, -3, -5, 0, -5, -2, 2, -5, 5, 3, 0, 0}; {4, -4, 6, -1, 6, -3, 1, 6, 5, 2, 0, 0}; {5, -2, -3, 3, -1, 3, -4, 2, 3, 2, 0, 0}; {5, -2, -3, 3, -1, 3, -3, 2, 3, 2, 0, 0}; {4, -5, 4, -4, 2, 5, 6, -3, 6, 4, 0, 0}; {5, -3, -5, 0, -5, -1, 1, 6, 4, 2, 0, 0}; {3, 6, 3, -5, 1, 5, 5, -3, 6, 4, 0, 0}; {2, 6, 4, -3, 5, -4, 0, 6, 5, 2, 0, 0}; {3, -4, -5, 1, -2, 2, -5, 2, 3, 1, 0, 0}; {2, 6, 4, -3, 5, -4, 0, 5, 5, 2, 0, 0}; {3, -4, -5, 1, -2, 2, -5, 1, 3, 1, 0, 0}; {3, -4, -5, 1, -2, 2, -4, 1, 3, 1, 0, 0}; {0, 3, 0, 4, -1, 2, 4, -4, 6, 3, 0, 0}; {-3,

-1, -5, -1, 5, -3, -5, 3, -4, -5, 0, 0}; {-2, 2, 0, 6, 2, 4, -2, 4, 4, 0, 0, 0}; {-3, 2, 1, -4, 6, -1, 4, -3, 1, 0, 0, 0}; {2, 3, -2, 1, -3, -4, 3, -2, -5, -2, 0, 0}; {3, -5, 5, -1, 6, 0, 0, -2, 3, 4, 0, 0}; {0, 3, 0, 5, -1, 5, 4, 1, 5, 5, 0, 0}; {5, -5, 4, -1, 1, -1, 6, 1, 1, -5, 0, 0}; {-3, -1, -4, 4, 6, 1, -4, 0, 0, -5, 0, 0}; {5, 6, 2, -3, -2, 5, -1, 3, 2, -4, 0, 0}; {-1, -1, 6, 0, 1, -4, 2, 5, 3, -2, 0, 0}; {3, 2, -4, 2, 1, 5, -2, 5, -4, 1, 0, 0}; {-3, -5, 0, 5, 4, -4, 1, -3, -2, 3, 0, 0}; {3, 2, -4, 2, 5, 1, 6, 4, 5, 6, 0, 0}; {-5, 5, -2, 5, 0, 4, -3, -1, -5, -5, 0, 0}; {1, 1, -4, 5, 4, -3, 2, -1, 3, -2, 0, 0}; {-1, -2, 4, 0, -2, 3, -4, 3, 6, 0, 0, 0}; {-2, -3, 3, -1, -3, 2, -5, 2, 6, -1, 0, 0}; {0, 1, -3, -5, -4, 1, -4, -5, 0, -4, 0, 0}; {-3, -4, 2, -2, -3, 1, 6, 2, 5, -1, 0, 0}; {-4, 6, -1, 6, 4, -4, 0, 6, -4, 2, 0, 0}; {-5, 5, -2, 5, 3, -5, 0, 6, -4, 2, 0, 0}; {-1, 5, 6, -2, -1, 5, 0, 6, 1, 1, 0, 0}; {-4, 2, 3, -5, -3, 4, -2, 4, 0, 0, 0, 0}; {-4, 5, -3, 4, -2, -5, 6, 3, 6, -4, 0, 0}; {-5, 5, -2, 6, 2, 2, -3, -1, 5, -2, 0, 0}; {-3, -4, 2, -1, -4, 1, 5, 1, 4, -2, 0, 0}; {4, 1, 5, 0, -4, 6, 1, 2, -4, -1, 0, 0}; {3, 0, 4, -1, -4, 6, 0, 1, -5, -1, 0, 0}; {-2, 5, -5, 0, -3, 5, 6, -5, 1, -2, 0, 0}; {-2, 6, -3, 3, 2, -1, 0, 4, -2, -3, 0, 0}; {-2, 5, -5, 1, 2, -2, 5, -1, -3, 0, 0, 0}; {0, 6, -5, 0, 0, 5, 0, 5, 1, 1, 0, 0}; {-5, 1, 2, -5, -4, 3, -2, 4, 0, 1, 0, 0}; {-5, 1, 2, -5, -4, 4, -2, 5, 0, 0, 0, 0}; {-4, 4, -5, 2, 6, 1, 0, -5, -4, -2, 0, 0}; {6, 0, 1, 6, -4, 2, -3, 2, -1, 0, 0, 0}; {-5, 3, 6, 1, 5, 1, -1, 6, -4, -2, 0, 0}; {5, -1, 0, 5, -5, 2, -4, 3, -1, 0, 0, 0}; {5, -1, 0, 5, -5, 2, -3, 3, -1, 0, 0, 0}; {5, -1, 0, 5, -5, 2, -3, 3, 0, 0, 0, 0}; {4, -2, -1, 4, 6, 1, -4, 2, -1, 0, 0, 0}; {4, -2, -1, 4, 6, 2, -4, 1, -1, -1, 0, 0}; {5, 0, 2, -4, -1, -4, 3, -3, -4, -1, 0, 0}; {4, -2, -1, 4, 6, 2, -4, 2, -1, -1, 0, 0}; {3, -2, 0, 6, -2, 6, 2, -4, -5, -2, 0, 0}; {2, -4, -3, 2, 5, 1, -5, 1, -1, -1, 0, 0}; {3, -2, 0, 6, -2, -5, 2, -3, -4, -2, 0, 0}; {2, -3, -1, 5, -3, 6, 2, -4, -5, -3, 0, 0}; {2, -3, -1, 5, -3, 6, 2, -4, -5, -2, 0, 0}; {3, 0, 4, 0, 6, 5, 3, 2, 5, -5, 0, 0}; {3, -3, -2, 3, 6, 3, -3, 0, -1, 1, 0, 0}; {3, -1, 2, -3, 3, -1, -3, 5, -5, -3, 0, 0}; {0, -5, -3, 3, -4, 4, 0, -5, -4, -3, 0, 0}; {1, -4, -2, 4, -3, 5, 1, -4, -4, -2, 0, 0}; {-1, 5, 6, -1, 3, -2, 5, 0, -1, -1, 0, 0}; {0, -5, -3, 3, -4, 4, 0, -4, -4, -2, 0, 0}; {0, -5, -3, 3, -4, 4, 0, -4, -3, -3, 0, 0}; {1, -3, 0, -5, 1, -2, -4, 4, 6, -4, 0, 0}; {2, -1, 3, -1, 6, 5, 0, 2, -5, -1, 0, 0}; {1, -5, -4, 1, 5, 1, -5, 0, -1, 0, 0, 0}; {0, -5, -3, 3, -4, 5, 0, -5, -4, -3, 0, 0}; {3, 1, 6, 3, -1, 0, -4, -2, 5, -3, 0, 0}; {1, -5, -4, 1, 5, 2, -4, -1, -2, 1, 0, 0}; {3, -3, -2, 3, -5, 5, 1, -1, -2, 0, 0, 0}; {0, -5, -3, 3, -3, 5, -1, -4, -5, -3, 0, 0}; {6, -2, -3, 0, 4, -1, -5, 5, 1, 3, 0, 0}; {-3, 4, 6, 0, -4, 3, 6, -5, 0, -1, 0, 0}; {-4, 4, -5, 2, 0, -3, 0, 3, -3, -3, 0, 0}; {3, -2, 0, 6, 6, 0, -4, 4, -2, 0, 0, 0}; {-2, 3, 3, -4, 6, -1, 5, -4, 3, 1, 0, 0}; {-5, 3, 6, 2, 3, -4, 4, 4, 6, -4, 0, 0}; {3, -3, -2, 4, 3, -5, 1, -3, 0, 0, 0, 0}; {1, 6, 6, -1, -3, 1, 5, 0, 2, 1, 0, 0}; {1, -5, -4, 2, 1, 6, 0, -4, 0, 0, 0, 0}; {-2, 4, 5, -1, -1, 5, -2, 6, -1, -1, 0, 0}; {-2, 4, 5, -1, -1, 5, -1, -5, 0, 0, 0, 0}; {-4, 2, 3, -3, -3, 4, -1, 3, 0, -1, 0, 0}; {4, -3, -3, 2, 1, -4, 1, 5, 1, 1, 0, 0}; {5, -2, -2, 3, 2, -3, 2, 6, 2, 1, 0, 0}; {5, -1, 0, 6, 6, 2, -4, 1, -1, 0, 0, 0}; {4, -3, -3, 2, 1, -4, 2, 5, 1, 1, 0, 0}; {4, -3, -3, 2, 1, -4, 2, 5, 2, 1, 0, 0}; {4, -3, -3, 2, 1, -4, 2, 6, 2, 2, 0, 0}; {4, -3, -3, 2, 1, -3, 2, 5, 2, 1, 0, 0}; {0, 3, 1, 4, 1, -5, -1, -1, 6, 4, 0, 0}; {5, 1, 4, 0, 2, -5, 3, 3, 6, -4, 0, 0}; {4, -3, -3, 2, 2, -4, 2, 6, 2, 1, 0, 0}; {4, -2, -1, 5, 6, 1, -4, 1, -2, 0, 0, 0}; {3, -4, -4, 1, 1, -5, 2, 6, 2, 2, 0, 0}; {4, -2, -1, 5, 6, 1, -3, 2, -1, 0, 0, 0}; {4, -2, -1, 5, 6, 2, -4, 1, -1, 0, 0, 0}; {3, -3, -2, 4, 5, 1, -5, 0, -2, 0, 0, 0}; {2, -5, -5, 0, 0, -5, 0, 5, 1, 1, 0, 0};

{3, -3, -2, 4, 5, 1, -5, 1, -2, 0, 0, 0}; {3, -4, -4, 1, 1, -4, 2, 5, 2, 1, 0, 0}; {2, -5, -5, 0, 0, -5, 1, 5, 1, 1, 0, 0}; {1, 6, 6, -1, -1, 6, 0, 4, 1, 1, 0, 0}; {2, -4, -3, 3, 4, 0, -5, 0, -2, 0, 0, 0}; f 4, -1, 1, -4, -1, -5, 4, -2, -3, -1, 0, 0}; {3, -2, 0, -5, -2, 6, 3, -3, -4, -1, 0, 0}; {3, -2, 0, -5, -2, 6, 3, -3, -3, -1, 0, 0}; {2, -4, -3, 3, 5, 0, -4, 2, -1, 0, 0, 0}; {0, 5, 5, -2, -1, 6, -1, 4, 0, 0, 0, 0}; {1, -5, -4, 2, 4, 0, 6, 0, -2, -1, 0, 0}; {1, -5, -4, 2, 4, 0, 6, 0, -2, 0, 0, 0}; {1, 6, 6, -1, 0, -5, 0, -5, 1, 1, 0, 0}; {0, 5, 5, -2, -1, 6, 0, 4, 1, 1, 0, 0}; {1, -5, -4, 2, 4, 0, -5, 0, -2, -1, 0, 0}; {0, 6, -5, 1, 3, -1, 6, -1, -3, -1, 0, 0}; {1, -5, -4, 2, 4, 0, -5, 0, -2, 0, 0, 0}; {0, 6, -5, 1, 3, -1, 6, -1, -2, -1, 0, 0}; {1, -5, -4, 2, 4, 0, -5, 1, -2, -1, 0, 0}; {2, -2, 1, -3, 1, -1, -3, 3, 5, -4, 0, 0}; {1, -5, -4, 2, 5, 0, -5, 1, -1, -1, 0, 0}; {0, 6, -5, 1, 4, -1, 6, 0, -2, -1, 0, 0}; {1, -4, -2, 5, -3, 5, 1, -4, -4, -2, 0, 0}; {1, -4, -2, 5, -3, 5, 2, -4, -3, -1, 0, 0}; f 2, -2, 1, -3, 2, -1, -3, 4, 6, -3, 0, 0}; {-1, 5, 6, 0, 3, -2, 6, 0, -1, 0, 0, 0}; {-1, 6, -4, 3, -5, 3, 0, -5, -3, -2, 0, 0}; {0, -5, -3, 4, -4, 5, 0, -5, -5, -2, 0, 0}; {1, -5, -4, 2, 5, 1, -4, 0, -1, 1, 0, 0}; {-1, 4, 4, -3, -1, 6, 0, 4, 1, 1, 0, 0}; {0, -4, -1, -5, 0, -2, -4, 3, 5, -4, 0, 0}; {-1, 6, -4, 3, -5, 4, 1, -5, 6, -3, 0, 0}; {-2, 5, -5, 2, 6, 4, 1, 6, 6, -4, 0, 0}; {-1, -5, -2, 6, 0, -3, -5, 3, 5, -4, 0, 0}; {-2, 5, -5, 2, -5, 3, 0, -5, -3, -2, 0, 0}; {-4, 3, 5, 0, 5, 1, -1, -5, -4, -2, 0, 0}; {-2, 5, -5, 2, -5, 4, 0, 6, -4, -2, 0, 0}; {-3, 4, 6, 1, 6, 3, -1, 6, -5, -3, 0, 0}; {-3, 4, 6, 1, 6, 3, -1, 6, -5, -2, 0, 0}; {1, 6, 6, -1, 3, -3, 6, 3, 0, 0, 0, 0}; {-2, 3, 3, -4, 0, -5, 4, 2, -1, 1, 0, 0}; {-3, 2, 2, -5, -1, -5, 4, 1, -1, 0, 0, 0}; {-3, 1, 0, 4, -4, 1, -3, 6, 2, 1, 0, 0}; {-5, 0, 0, 5, -2, 5, 3, 1, -2, 0, 0, 0}; {-4, 3, 5, 0, -4, 3, 5, -5, 0, -1, 0, 0}; {5, -3, -4, 0, 5, -1, -5, 6, 1, 2, 0, 0}; {5, 0, 2, -3, 6, 2, 3, 6, -1, -1, 0, 0}; {4, -1, 1, -4, 5, 1, 3, 5, -1, -2, 0, 0}; {-5, 0, 0, 5, 1, 4, -3, 5, 2, 2, 0, 0}; {6, -1, -1, 4, 0, 4, -4, 3, 1, 2, 0, 0}; {4, -4, -5, -1, 6, -3, 1, -5, 5, 2, 0, 0}; {4, -3, -3, 2, -2, 2, -4, 2, 3, 2, 0, 0}; {3, -5, 6, -2, 5, -4, 2, -5, 6, 3, 0, 0}; {5, -2, -2, 3, -1, 4, -4, 2, 1, 2, 0, 0}; {0, 6, -5, 1, -1, 6, 0, 4, 1, 0, 0, 0}; {-3, 2, 2, -5, 4, -1, 4, -5, 3, 2, 0, 0}; {-2, 4, 5, -1, -3, 5, -1, 3, 0, 0, 0, 0}; {-3, 5, -4, 4, 4, -4, 2, -1, -4, -4, 0, 0}; {3, 1, 6, 4, 6, 2, -5, 1, 4, -5, 0, 0}; {-5, 0, 0, 5, 2, 5, -3, 5, 2, 3, 0, 0}; {6, -1, -1, 4, 1, 4, -4, 4, 2, 3, 0, 0}; {-5, 1, 2, -4, 6, -2, 4, 0, 0, 1, 0, 0}; {5, -2, -2, 3, 0, 3, -4, 3, 3, 2, 0, 0}; {6, 0, 1, -5, 5, -3, 3, -1, 0, 1, 0, 0}; {3, -5, 6, -2, 6, -4, 0, 6, 6, 3, 0, 0}; {3, -5, 6, -2, 6, -3, 0, 6, 4, 3, 0, 0}; {1, 4, 2, 5, 0, 2, 5, -2, -5, 4, 0, 0}; {-3, 0, -2, 2, -3, 0, 3, -4, 6, 3, 0, 0}; {-5, 0, 0, 6, 3, -2, 3, 6, 2, 1, 0, 0}; {3, -5, 6, -1, -5, 3, -5, -4, 5, 3, 0, 0}; {3, -4, -4, 2, -1, -3, 2, 4, 2, 0, 0, 0}; {1, 6, 6, 0, -3, -1, 5, 1, 2, 0, 0, 0}; {1, 6, 6, 0, -3, 0, 6, 1, 2, 1, 0, 0}; {1, 6, 6, 0, -3, 0, 6, 1, 2, 2, 0, 0}; {-1, 3, 2, -5, 3, 5, -2, 5, 4, 2, 0, 0}; {-1, 3, 2, -5, 3, 6, -1, 5, 4, 2, 0, 0}; {-1, 3, 2, -5, 3, 6, -1, 5, 5, 2, 0, 0}; {-2, 2, 1, 6, 2, 5, -2, 4, 4, 1, 0, 0}; {0, 5, 5, -1, -4, 0, 6, 1, 2, 1, 0, 0}; {-2, 2, 1, 6, 2, 5, -2, 5, 4, 2, 0, 0}; {0, 5, 5, -1, -4, 0, 5, 1, 3, 2, 0, 0}; {-2, 3, 3, -3, -5, -1, 4, 0, 2, 2, 0, 0}; {-3, 1, 0, 5, 2, 5, -2, 4, 4, 2, 0, 0}; {1, 5, 4, -3, 6, 1, 6, -4, 3, 2, 0, 0}; {2, -5, -5, 1, -1, -4, 1, 4, 1, 0, 0, 0}; {0, 4, 3, -4, 5, 1, 5, -5, 4, 3, 0, 0}; {0, 4, 3, -4, 5, 1, 6, -5, 4, 2, 0, 0}; {-3, 3, 4, -1, -1, 4, -2, 6, -1, -1, 0, 0}; {5, -1, 0, -5, -4, 2, -4, 5, -2, -1, 0, 0}; {3, -4, -4, 2, 2, -5, -4, 0, 1, 0, 0, 0}; {5, -5, 4, -5, 4, -2, -2, 0, -4, 6, 0, 0}; {-2, 4, 5, 0, 2, -2, 6, 0, -3, -1, 0, 0}; {-4, 4, -5, 4, -2, 6, 6, 3, 6, -4, 0, 0}; {2, -5, -5, 1, -4, 0, -5, 2, 2, 1, 0, 0}; {-1,

5, 6, 1, -2, 5, 5, -4, 1, -1, 0, 0}; {2, 6, 5, -2, 5, -4, 0, -5, 4, 3, 0, 0}; {3, -4, -4, 2, -2, 2, -4, 2, 2, 2, 0, 0}; {1, 5, 4, -3, 4, -5, 0, 6, 4, 2, 0, 0}; {1, 5, 4, -3, 4, -5, 0, 6, 5, 3, 0, 0}; {2, -5, -5, 1, -3, 1, -5, 2, 2, 1, 0, 0}; {-3, 1, 0, 6, 1, 4, -2, 4, 4, 1, 0, 0}; {6, -3, -5, 0, -5, -3, 2, -5, 6, 2, 0, 0}; {4, 0, 3, 1, -3, 4, 4, 2, 6, -3, 0, 0}; {5, -3, -4, 3, -3, 0, -5, 3, 3, -1, 0, 0}; {2, 5, 3, -3, 0, -2, 4, -2, -1, 4, 0, 0}; {-2, 2, 1, -4, 1, 2, -4, 4, 6, 1, 0, 0}; {4, 5, 1, 6, -4, 4, -1, 5, 3, -3, 0, 0}; {3, 4, 0, 5, -5, 3, -1, 5, 3, -3, 0, 0}; {1, 2, -1, 4, 0, 2, -4, 4, 4, -5, 0, 0}; {1, -3, 1, 1, 6, 3, -4, -1, 4, 2, 0, 0}; {-1, -4, 1, 3, 1, 4, -5, 2, 2, 5, 0, 0}; {5, 5, 1, 6, 2, 4, -2, 6, 5, -4, 0, 0}; {-4, -3, 6, 1, 3, 0, -5, 1, 1, -5, 0, 0}; {5, 5, 1, -5, -3, 5, -1, 3, 2, -3, 0, 0}; {2, 1, -4, 1, 5, 1, 5, 3, 5, 6, 0, 0}; {-3, -5, 1, 6, 4, -3, 1, -3, -1, 3, 0, 0}; {6, 3, -4, 1, -5, -5, 3, 3, -3, -1, 0, 0}; {-3, 6, -1, 4, -2, -1, 4, 4, 0, -2, 0, 0}; {-2, -5, 0, 5, 0, -5, -5, -1, 1, 3, 0, 0}; {-2, -4, 2, -4, 4, 3, -1, 0, -5, -2, 0, 0}; {-1, -1, -5, 3, 3, -4, 2, -1, 4, -2, 0, 0}; {-5, 5, -1, 5, 3, -5, -1, 6, -4, 1, 0, 0}; {-4, 6, 0, 6, 4, -4, 1, -5, -2, 2, 0, 0}; {2, 5, 4, 3, -5, 2, -3, 0, 6, 5, 0, 0}; {-5, 5, -1, 5, -5, 0, 5, -5, 6, 0, 0, 0}; {3, 0, 5, -1, 4, 5, 3, 3, 6, 6, 0, 0}; {6, 4, -2, 5, 0, 1, -2, -1, 6, -3, 0, 0}; {-5, 4, -3, 3, -3, -1, 2, 1, 4, 4, 0, 0}; {-2, -5, 0, 6, 0, 2, 2, 1, 5, 5, 0, 0}; {2, -1, 4, -2, 5, 5, 1, 2, -4, -2, 0, 0}; {-3, 5, -3, 2, -4, -4, 6, 5, -5, -5, 0, 0}; {6, 2, 6, -1, 5, -5, 5, 3, -5, -5, 0, 0}; {3, 0, 5, -1, -5, 5, 1, 2, -4, -1, 0, 0}; {4, 1, 6, 0, -4, -5, 1, 2, -4, -1, 0, 0}; {3, 1, -5, 2, -1, 1, -4, -2, 6, -4, 0, 0}; {2, -1, 4, -2, -5, 5, 0, 1, -5, -1, 0, 0}; {2, -1, 4, -2, -5, 5, 0, 1, -4, -1, 0, 0}; {4, 2, -4, 3, 1, 5, -3, 4, -5, 0, 0, 0}; {-1, -5, -1, 4, 1, -5, 6, -1, 1, 3, 0, 0}; {-5, -5, 3, 0, 1, 5, -1, -3, 1, -4, 0, 0}; {3, 1, -5, 2, 1, 4, -4, 4, 6, 0, 0, 0}; {3, 2, -3, 5, 6, -2, 3, 0, 4, -1, 0, 0}; {5, 2, -5, 1, 1, 5, -2, -3, -3, 2, 0, 0}; {6, 4, -2, 5, 6, -1, 5, 6, 6, 0, 0, 0}; {3, 0, 5, 0, 3, -2, -1, 6, -5, -2, 0, 0}; {1, -2, 3, -2, 1, -3, -4, 4, -5, -3, 0, 0}; {1, -2, 3, -2, 1, -3, -3, 5, -5, -3, 0, 0}; {-3, 6, -1, 6, -2, -5, -4, -1, 5, 5, 0, 0}; {6, 3, -4, 3, -4, -1, 1, 0, 4, 4, 0, 0}; {3, -1, 3, -3, 2, -2, -2, 1, -5, -5, 0, 0}; {4, 2, -4, 4, -1, 0, -3, -1, 5, -3, 0, 0}; {0, -4, 0, 6, -1, -2, 6, 6, -4, -5, 0, 0}; {1, -2, 3, -2, 4, 4, 2, 2, 5, 6, 0, 0}; {1, -2, 3, -2, 4, 4, 2, 2, 5, -5, 0, 0}; {-2, 6, -2, 4, -3, -4, 6, 5, -5, -4, 0, 0}; {0, -3, 2, -3, 3, 4, 1, 2, 5, 6, 0, 0}; {1, -3, 1, -5, 1, -3, -3, 0, -5, -5, 0, 0}; {2, -1, 4, -1, 6, 6, 1, 2, -4, -1, 0, 0}; {-1, -4, 1, -4, 3, 3, 0, 2, 6, -2, 0, 0}; {-5, 3, -5, 1, -5, -5, 5, 4, 6, -5, 0, 0}; {6, 4, -2, 6, 2, 6, -3, 4, 6, 0, 0, 0}; {-1, -5, -1, 5, 0, -4, -5, 0, 2, 4, 0, 0}; {-2,5,-4, 1, -5, 3, -2, -5, -5, -4, 0, 0}; {-1, -5, -1, 5, 0, -2, 4, 5, -2, 0, 0, 0}; {0, -3, 2, -3, 5, 4, 0, 1, -5, -2, 0, 0}; {5, -1, 1, 5, -2, 6, 2, -1, -2, -2, 0, 0}; {-5, 2, 5, -2, 4, 1, -2, -5, -4, -3, 0, 0}; {3, 1, -5, 3, 0, 4, -4, 3, 6, -1, 0, 0}; {3, 1, -5, 3, 0, 4, -4, 4, 6, 0, 0, 0}; {3, 1, -5, 3, 0, 4, -3, 3, -5, -1, 0, 0}; {2, 0, 6, 2, 0, 4, -4, 3, 6, 0, 0, 0}; {-3, 4, -5, 0, -5, -3, -5, 4, -5, -5, 0, 0}; {1, -1, 5, 1, -1, 4, -4, 3, 6, 0, 0, 0}; {-2, 6, -2, 4, 0, -3, 4, 4, -2, 0, 0, 0}; {-2, 6, -2, 4, 0, -2, 4, 4, -2, 0, 0, 0}; {-1, -3, 3, -1, -2, 2, -5, 3, 6, 0, 0, 0}; {3, -1, 3, -3, 6, 2, 3, -5, -1, 0, 0, 0}; {-3, 5, -3, 3, 0, -3, 2, 3, -3, -1, 0, 0}; {6, 0, 2, 6, 2, -3, -2, -3, 3, -1, 0, 0}; {6, 0, 2, 6, 2, -3, -2, -2, 3, 0, 0, 0}; {-5, 5, -1, -5, -3, 5, -4, 4, 5, -4, 0, 0}; {-1, -4, 1, -3, 0, -4, -4, 3, 6, -3, 0, 0}; {-4, 3, 6, 0, 1, -5, 6, 0, -2, 0, 0, 0}; {-5, 1, 3, -4, -4, 2, -2, 4, 0, 1, 0, 0}; {-2, -2, 6, 5, -1, 3, -3, 4, -2, -2, 0, 0}; {-4, 4, -4, 3, 6, 1, 0, -5, -4, -2, 0, 0}; {-5, 2, 5, -1, 1, -4, 5, 0, -2, -1, 0, 0}; {4, -2, 0, 5, 6, 1, -4, 2, -1, 0, 0, 0}; {3, -3, -1, 4, 5, 1, -4, 3, -1, 0, 0, 0}; {2, -2, 2, -3, 1, -2, -2, 1, 6, 6, 0, 0}; {1, -5, -3, 2, 4, 0, 6, 1, -2, -1, 0, 0}; {0, 6, -4, 1, 4, -1, 6, 1, -2, -1, 0, 0}; {-2, 4, 6, -1, 2, -3, 5, -1, -3, -1, 0, 0}; {-1, -5, -1, 6, -1, -3, -5, 5, -5, -4, 0, 0}; {-3, 3, 5, -2, 2, -3, 4, -1, -3, -2, 0, 0}; {-2, 5, -4, 2, -5, 3, 0, -4, -3, -2, 0, 0}; {-3, 4, -5, 1, 6, 2, -1, -5, -4, -3, 0, 0}; {-2, 6, -2, 5, -1, -4, 6, 3, 6, -4, 0, 0}; {-3, 4, -5, 1, 6, 3, 0, 6, 6, -2, 0, 0}; {-4, 3, 6, 0, 5, 2, -1, 6, 6, -3, 0, 0}; {-3, 3, 5, -2, 2, -1, 6, -2, -3, 0, 0, 0}; {5, 0, 3, -3, 2, 0, -3, -4, -4, -3, 0, 0}; {3, -1, 3, -2, 4, 4, 1, 3, 6, -3, 0, 0}; {2, -1, 4, 0, -5, -2, 0, -5, -4, 1, 0, 0}; {0, -3, 2, -2, 6, -3, 0, 6, -4, 1, 0, 0}; {-5, 2, 5, -1, 5, 1, -2, 6, -5, -4, 0, 0}; {5, 0, 3, -3, 3, -1, -3, 6, -5, -3, 0, 0}; {-3, 5, -3, 4, -1, -3, 4, 4, -2, -1, 0, 0}; {5, -1, 1, 6, -1, -5, 2, -3, -3, -3, 0, 0}; {3, -3, -1, 4, -3, 5, 1, -2, -3, -2, 0, 0}; {1, 6, -5, -1, 3, -2, 6, 3, 0, 0, 0, 0}; {0, 6, -4, 1, 6, 3, 0, -3, -3, -2, 0, 0}; {1, -4, -1, 5, -1, -3, -5, 6, -5, -3, 0, 0}; {-1, 5, -5, 0, 5, 2, 0, -2, -3, -2, 0, 0}; {-5, 4, -3, 5, 1, 1, -2, 0, 5, -3, 0, 0}; {0, -5, -2, 4, -2, -3, -5, 6, -5, -4, 0, 0}; {-5, 3, -5, 2, -2, -4, 2, 3, -3, -1, 0, 0}; {6, 2, 6, 1, -3, -5, 1, 2, -4, -1, 0, 0}; {6, 2, 6, 1, -3, -5, 2, 3, -3, -1, 0, 0}; {-3, 4, -5, 1, -4, 6, 6, 5, 6, -4, 0, 0}; {1, -4, -1, 5, 1, -4, -5, -1, 1, 2, 0, 0}; {-3, 4, -5, 1, -2, 5, 5, -3, 0, 0, 0, 0}; {3, -3, -1, 4, 0, 6, -3, -3, 2, 0, 0, 0}; {4, -2, 0, 5, 1, -5, -2, -3, 2, 0, 0, 0}; {-5, 2, 5, -1, -4, 4, 4, -5, -1, 0, 0, 0}; {6, 1, 4, -2, -5, 3, 4, -5, 0, -1, 0, 0}; {5, 0, 3, -3, 6, 2, 3, -5, -1, -1, 0, 0}; {5, 0, 3, -3, 6, 2, 4, 6, -1, -1, 0, 0}; {4, -1, 2, -4, 5, 1, 4, 5, -1, -2, 0, 0}; {3, -3, -1, 4, 0, -5, -3, -4, 1, 0, 0, 0}; {3, -2, 1, -5, 4, 0, 4, 4, -2, -1, 0, 0}; {2, -4, -2, 3, -1, -5, -4, -5, 1, -2, 0, 0}; {1, -4, -1, 5, 3, -3, -4, 1, 0, 2, 0, 0}; {4, -1, 2, -4, 6, 2, 3, 6, -1, -2, 0, 0}; {-4, 2, 4, -2, -4, 4, 3, -5, 1, -1, 0, 0}; {5, -1, 1, -5, 5, -3, 3, 0, -1, 1, 0, 0}; {2, -5, -4, 1, -2, 1, -5, 2, 2, 2, 0, 0}; {2, -5, -4, 1, -2, 1, -5, 3, 1, 1, 0, 0}; {-3, 0, -1, 2, -3, -1, 4, -2, 6, 4, 0, 0}; {-4, 2, 4, -2, -3, 3, -3, 6, -1, 0, 0, 0}; {2, 2, -2, -2, 3, 6, 1, 6, -1, -3, 0, 0}; {2, -4, -2, 4, 4, 0, -5, 0, -2, 0, 0, 0}; {0, 5, 6, -1, -2, 5, 0, 4, 0, 1, 0, 0}; {-3, -3, 5, 5, -1, 3, -3, 4, -2, -3, 0, 0}; {-3, -3, 5, 5, -1, 4, -3, 4, -2, -3, 0, 0}; {5, 3, -3, -5, -1, 2, 6, 0, 4, 1, 0, 0}; {3, -2, 1, -4, -2, 6, 3, -3, -3, -1, 0, 0}; {-2, 3, 4, -3, -3, 4, -1, 3, 0, 1, 0, 0}; {-2, 3, 4, -3, -3, 5, -1, 3, 0, 0, 0, 0}; {2, -3, 0, -5, -2, 5, 3, -2, -3, -2, 0, 0}; {0, 6, -4, 2, 4, -1, -5, 1, -1, -1, 0, 0}; {-2, 3, 4, -3, -2, 5, -2, 5, 0, 0, 0, 0}; {-3, 3, 5, -1, 1, -3, 4, -2, -4, -1, 0, 0}; {-3, 3, 5, -1, 1, -3, 5, -2, -4, -1, 0, 0}; {-3, 3, 5, -1, 1, -3, 5, -1, -3, 0, 0, 0}; {-3, 2, 3, -4, -3, 4, -1, 5, 1, 1, 0, 0}; {-4, 1, 2, -5, -4, 3, -2, 4, 0, 1, 0, 0}; {-1, -4, 1, -2, 4, -4, -1, 6, -5, 1, 0, 0}; {-3, 4, -5, 2, 6, 2, 0, -5, -4, -2, 0, 0}; {-4, 2, 4, -2, 1, -3, 5, -1, -3, -1, 0, 0}; {6, 0, 2, -4, -1, -5, 4, -2, -4, -1, 0, 0}; {-1, -4, 1, -2, 5, -3, -1, 6, -5, 1, 0, 0}; {-5, 1, 3, -3, 1, -4, 4, -1, -2, -2, 0, 0}; {-4, 3, 6, 1, 6, 2, 0, -5, -4, -2, 0, 0}; {6, 0, 2, -4, 0, -5, 4, -1, -2, -1, 0, 0}; {-5, 2, 5, 0, 5, 1, -1, -5, -4, -3, 0, 0}; {5, -1, 1, -5, -1, -5, 2, -3, -4, -2, 0, 0}; {5, 0, 3, -2, 4, 0, -2, 6, -4, -3, 0, 0}; {-1, 5, -5, 1, 6, 2, 0, -2, -3, -2, 0, 0}; {-4, 1, 2, -5, -1, 6, 4, 1, -2, 0, 0, 0}; {4, -2, 0, 6, -1, -5, 2, -3, -4, -2, 0, 0}; {3, -4, -3, 2, 6, 1, -5, 1, -1, -1, 0, 0}; {-4, 2, 4, -2, 4, 0, -2, -3, -4, -3, 0, 0}; {-5, 1, 3, -3, 3, -1, -2, -4, -4, -3, 0, 0}; {1, -5, -3, 3, -1, 5, -4, -4, 1, -1, 0, 0}; {0, 6, -4, 2, -2, 5, -5, -5, 1, -1, 0, 0}; {1, -5, -3, 3, 0, -5, 6, -3, 1, 0, 0, 0}; {-1, -5, -1, -5, 6, 5, -5, -1, -5, -5, 0, 0}; {-4, 2, 4, -1, -4, 3, 3, -5, 1, -1, 0, 0}; {-5, 2, 5, 1, -1,

-3, 3, -3, -3, -2, 0, 0}; {6, -1, 0, 6, 2, -2, 3, 6, 2, 0, 0, 0}; {6, 0, 2, -3, 6, 3, -3, 1, -1, -1, 0, 0}; {2, -4, -2, 5, 2, 6, 1, -1, -2, -1, 0, 0}; {-1, 4, 5, -1, -5, -1, 5, 1, 0, 0, 0, 0}; {-3, 1, 1, 6, 1, 4, -2, 5, 3, 1, 0, 0}; {-4, 0, 0, 5, 1, 4, -3, 4, 4, 2, 0, 0}; {-2, 4, 6, 1, -1, 4, -1, -4, -2, 0, 0, 0}; {-3, 1, 1, 6, 2, 5, -2, 5, 3, 2, 0, 0}; {-3, 1, 1, 6, 2, 5, -2, 5, 3, 3, 0, 0}; {-5, -2, -3, 1, -4, -2, 3, -4, 6, 3, 0, 0}; {-5, -1, -1, 4, 0, 3, -3, 4, 3, 1, 0, 0}; {-5, -1, -1, 4, 0, 4, -3, 3, 3, 2, 0, 0}; {6, -3, -4, 0, -5, -2, 2, -4, 5, 3, 0, 0}; {6, 0, 2, -3, -5, 1, -4, 6, -2, 0, 0, 0}; {6, -3, -4, 0, -5, -1, 2, -4, 5, 3, 0, 0}; {3, -4, -3, 3, 0, -4, 1, 5, 1, 0, 0, 0}; {3, -3, -1, 6, 4, 1, -5, 0, -1, 0, 0, 0}; {0, 6, -4, 3, 1, 5, 0, -2, -3, -1, 0, 0}; {-1, -5, -1, -4, -3, 3, -1, 1, 4, 6, 0, 0}; {-1, 4, 5, -1, -3, 5, -1, 3, 0, 1, 0, 0}; {6, 6, 2, 3, -4, 2, -5, 3, -3, -3, 0, 0}; {0, 6, -4, 3, 3, -1, 5, -1, -3, -1, 0, 0}; {5, -3, -3, 2, 0, -4, 2, 5, 1, 2, 0, 0}; {-5, -5, 3, 4, -2, 3, -3, 4, -3, -4, 0, 0}; {6, 6, 2, 3, -3, 2, -4, 3, -3, -4, 0, 0}; {6, -2, -2, 3, 2, -3, 2, 6, 2, 2, 0, 0}; {-5, 0, 1, -5, -5, 3, -3, 2, -1, 0, 0, 0}; {-5, 0, 1, -5, -5, 3, -3, 2, -1, 1, 0, 0}; {5, 5, 1, 2, -3, 2, -4, 3, -3, -4, 0, 0}; {4, -3, -2, 4, 5, 1, -4, 1, -2, 0, 0, 0}; {5, 1, 5, 2, -4, 1, 4, -4, -5, 6, 0, 0}; {-4, 0, 0, 5, -1, -5, -1, -4, -4, 3, 0, 0}; {3, -5, -5, 1, -5, 4, -5, -5, 6, 4, 0, 0}; {3, -5, -5, 1, -5, 4, -4, 6, 6, 2, 0, 0}; {5, -4, -5, 0, 6, -3, 2, -4, 5, 3, 0, 0}; {4, -2, 0, -4, 5, 2, -4, 1, -1, -1, 0, 0}; {2, -5, -4, 3, -1, -4, 1, 4, 1, 0, 0, 0}; {0, 5, 6, 1, -3, 6, -1, 3, 1, 1, 0, 0}; {0, 5, 6, 1, -3, -5, 0, 3, 1, 0, 0, 0}; {-4, 0, 0, 6, 2, -2, 3, 6, 3, 3, 0, 0}; {1, 6, -5, 2, 0, 6, 0, -4, 0, 1, 0, 0}; {-3, 1, 1, -5, 4, -1, 3, -5, 2, 1, 0, 0}; {5, -2, -1, 6, -2, 4, 1, 2, -1, -3, 0, 0}; {-1, 3, 3, -2, 4, 1, 5, -5, 4, 1, 0, 0}; {5, -4, -5, 1, 6, 5, -1, -5, -5, 2, 0, 0}; {3, -1, 3, 2, -5, 4, -3, -1, 4, 3, 0, 0}; {-1, 4, 6, 2, -3, -5, 0, 3, 1, -1, 0, 0}; {-4, 0, 1, -4, 3, -1, 4, -5, 3, 1, 0, 0}; {-4, 1, 3, -1, -5, 5, -2, 2, 0, -1, 0, 0}; {6, -2, -1, 6, 1, -2, 3, 6, 2, 0, 0, 0}; {4, -4, -3, 4, -1, -4, 1, 5, 3, 3, 0, 0}; {4, -1, 3, 1, 5, 0, 3, 6, 6, 5, 0, 0}; {-1, 1, 0, 6, -2, -4, 2, -3, -3, 4, 0, 0}; {6, 2, -5, -5, -2, 6, -1, 2, 5, 3, 0, 0}; {3, 0, 6, -5, 0, -2, 4, -4, 1, 1, 0, 0}; {3, 2, -2, 1, -4, -3, 3, -2, -5, -2, 0, 0}; {5, 4, 0, 4, 3, -1, 3, -3, 6, -4, 0, 0}; {-1, 1, 0, -5, -2, -4, 3, -3, -2, 5, 0, 0}; {-5, -5, 4, -3, -2, 6, 0, 4, 2, -4, 0, 0}; {3, 3, 0, 6, -4, 4, -2, 2, 1, -4, 0, 0}; {-2, -1, -3, 4, -5, 2, -5, 0, -1, -5, 0, 0}; {-3, -2, -4, 3, 6, 1, -5, 0, -1, -5, 0, 0}; {2, 2, -1, 5, 0, 3, -3, 4, 4, -4, 0, 0}; {4, 0, 5, -4, 4, -3, -3, 1, 3, 4, 0, 0}; {5, 3, -2, 3, 2, -5, -1, 6, -3, 1, 0, 0}; {5, 3, -2, 3, 2, -5, -1, -5, -2, 2, 0, 0}; {5, 2, -4, 0, -2, 6, 1, 2, -3, 0, 0, 0}; {6, 5, 1, -5, -4, 0, 5, 1, 6, 0, 0, 0}; {2, -1, 5, -2, 2, -3, -3, 6, -5, -4, 0, 0}; {6, 3, -3, 2, -4, 5, 5, -2, 0, 2, 0, 0}; {5, 2, -4, 1, -5, 4, 5, -3, 0, 2, 0, 0}; {3, 0, 6, -1, 5, 6, 2, 3, -3, -3, 0, 0}; {4, 1, -5, 0, -5, 6, 1, 2, -3, -1, 0, 0}; {-4, 6, 1, -5, 3, 6, -3, -3, 1, 3, 0, 0}; {2, -1, 5, -2, 5, -5, 1, 2, -3, -3, 0, 0}; {1, -2, 4, -3, 4, -5, 0, 1, -3, -3, 0, 0}; {0, -4, 1, 5, 1, -5, -5, 0, 2, 3, 0, 0}; {6, 5, 1, -4, -5, 0, 5, 1, 5, -1, 0, 0}; {2, 0, -5, 1, 0, 4, -3, 4, -5, 0, 0, 0}; {-5, 5, 0, 6, -3, 5, -5, 4, 6, -5, 0, 0}; {4, 1, -5, 0, 2, -3, -1, -4, -5, -1, 0, 0}; {-1, -4, 2, -5, -2, 4, -2, -4, -5, -4, 0, 0}; {6, 4, -1, 5, -3, 5, 6, 3, 6, -4, 0, 0}; {4, 0, 5, -2, 2, 0, -4, -3, -3, -5, 0, 0}; {5, 1, 6, -1, 4, -2, -3, 5, -5, -4, 0, 0}; {3, 0, 6, 0, 6, 5, 2, 2, -4, -2, 0, 0}; {1, -3, 2, -5, 0, -1, 6, 6, -1, 0, 0, 0}; {1, -2, 4, -2, 4, 4, 1, 2, -4, -2, 0, 0}; {0, -3, 3, -3, 3, 4, 1, 1, -4, -3, 0, 0}; {-2, 6, -1, 4, -3, -3, 5, 5, -2, -1, 0, 0}; {-2, -5, 1, -5, 1, 3, 0, 1, -5, -4, 0, 0}; {-3, 5, -2, 3, -4, -3, 5, 4, -2, -2, 0, 0}; {3, -1, 4, -3, 3, 2, 6, -5, 0, 1, 0, 0};

{0, -3, 3, -3, 4, 4, 0, 1, -4, -2, 0, 0}; {-1, -5, 0, 5, -1, -1, 5, 5, -1, -1, 0, 0}; {0, -3, 3, -3, 4, 5, 0, 1, -4, -2, 0, 0}; {-2, 6, -1, 4, -2, -2, 5, 5, -2, -1, 0, 0}; {-2, -5, 1, -5, 2, 3, 0, 1, -5, -3, 0, 0}; {-3, 6, 0, 6, 1, 2, 1, 1, 5, 6, 0, 0}; {6, 3, -3, 3, -2, 0, 0, 0, 4, 5, 0, 0}; {4, 0, 5, -2, 4, 5, 5, 3, 6, 6, 0, 0}; {4, 1, -5, 1, -4, -2, 0, -1, 3, 4, 0, 0}; {-1, -4, 2, -4, 3, 5, 0, 1, -4, -3, 0, 0}; {6, 2, -5, 0, 6, -5, 5, 4, -5, -5, 0, 0}; {0, -3, 3, -3, 5, 5, 0, 1, -5, -2, 0, 0}; {-2, 6, -1, 4, -1, -2, 4, 4, -2, -1, 0, 0}; {-1, -4, 2, -4, 4, 4, -1, 0, -5, -2, 0, 0}; {-3, 5, -2, 3, -2, -2, 4, 4, -2, -1, 0, 0}; {-2, -5, 1, -5, 3, 4, -1, 0, -5, -3, 0, 0}; {-1, -5, 0, 5, 0, 1, 3, 2, 5, 5, 0, 0}; {-1, -5, 0, 5, 1, 3, 3, 1, 5, 5, 0, 0}; {-1, -4, 2, -4, 5, 1, 2, -4, -2, 1, 0, 0}; {-3, 5, -2, 3, -1, -3, 3, 3, -3, -1, 0, 0}; {-1, 6, -2, 2, -3, -3, -5, 5, -5, -4, 0, 0}; {2, 0, -5, 2, 0, 3, -4, 3, 6, -1, 0, 0}; {0, -2, 5, 0, -1, 3, -5, 3, 6, 0, 0, 0}; {-1, -3, 4, -1, -2, 2, 6, 2, 5, -1, 0, 0}; {-5, 3, -4, 1, -2, 5, 5, -2, 0, 2, 0, 0}; {3, -1, 4, -3, 6, 2, 3, -5, -1, 1, 0, 0}; {-5, 3, -4, 1, -2, -4, 2, 2, -4, -1, 0, 0}; {-4, 5, -1, 5, 4, -5, -1, 6, -4, 1, 0, 0}; {4, 0, 5, -2, -3, 4, 3, -3, -1, 1, 0, 0}; {4, 2, -3, 4, -5, 4, 5, 2, 5, -4, 0, 0}; {1, -2, 4, -1, 1, -3, -4, 4, -5, -2, 0, 0}; {1, -2, 4, -1, 1, -3, -3, 5, -5, -3, 0, 0}; {-3, 3, 6, -2, -3, 2, -1, 5, 2, 2, 0, 0}; {0, -3, 3, -2, 0, -4, -3, 5, -5, -3, 0, 0}; {-3, 4, -4, 1, 1, -5, 6, 1, -1, 0, 0, 0}; {-3, 4, -4, 1, 1, -5, 6, 1, -1, 1, 0, 0}; {-2, 6, -1, 5, 6, 1, 2, -3, -4, -1, 0, 0}; {-1, -4, 2, -3, -1, -5, -3, 5, 6, -3, 0, 0}; {-2, 6, -1, 5, -5, 2, 1, -4, -3, -1, 0, 0}; {-1, -4, 2, -3, 0, -4, -4, 4, 6, -3, 0, 0}; {-3, 5, -2, 4, 6, 1, 0, -5, -3, -2, 0, 0}; {-5, 2, 6, -1, 0, 6, 5, 0, -2, 0, 0, 0}; {1, -3, 2, -4, 0, -3, -3, 0, 6, 6, 0, 0}; {-1, -5, 0, 6, -1, -4, -4, 0, 4, 5, 0, 0}; {-4, 4, -3, 3, -4, -5, 4, 4, -3, -2, 0, 0}; {-5, 3, -4, 2, -5, -5, 3, 4, -3, -2, 0, 0}; {-4, 5, -1, 6, 0, 1, -1, 0, 6, -4, 0, 0}; {-5, 3, -4, 2, -5, -5, 5, 4, -5, -5, 0, 0}; {3, 0, 6, 1, -5, -2, -2, -1, 3, 4, 0, 0}; {3, 0, 6, 1, -5, -2, -1, -1, 3, 4, 0, 0}; {2, -1, 5, 0, 6, -3, -1, -1, 2, 4, 0, 0}; {-3, 5, -2, 4, -2, -3, 4, 4, -2, -1, 0, 0}; {-2, -5, 1, -4, 3, 3, -1, 0, -5, -2, 0, 0}; {-4, 4, -3, 3, -3, -4, 4, 4, -3, -2, 0, 0}; {-4, 4, -3, 3, -3, -4, 4, 4, -2, -1, 0, 0}; {-5, 3, -4, 2, -4, -5, 3, 4, -3, -1, 0, 0}; {-4, 4, -3, 3, -3, -3, 4, 4, -2, -2, 0, 0}; {-3, 6, 0, -5, 2, 3, -1, 0, -5, -3, 0, 0}; {-4, 5, -1, 6, 1, 2, -1, 0, 6, -4, 0, 0}; {-4, 5, -1, 6, 1, 2, -1, 0, -5, -3, 0, 0}; {5, 1, 6, 0, 6, 6, 3, 3, -3, -2, 0, 0}; {6, 2, -5, 1, -5, -5, 4, 4, -5, -5, 0, 0}; {5, 1, 6, 0, 6, 6, 3, 4, 6, -5, 0, 0}; {5, 1, 6, 0, 6, 6, 4, 4, 6, -5, 0, 0}; {1, -3, 2, -4, 2, 3, 3, 2, 5, 6, 0, 0}; {-3, 5, -2, 4, -1, 1, 2, 1, 4, 5, 0, 0}; {6, 2, -5, 1, -4, -2, 3, 3, -1, -2, 0, 0}; {6, 1, 5, -2, 4, 0, -3, 6, -5, -4, 0, 0}; {6, 2, -5, 1, -4, 5, 5, -2, 1, 3, 0, 0}; {-5, 3, -4, 2, -3, -4, 2, 3, -3, -1, 0, 0}; {-5, 3, -4, 2, -3, -4, 3, 3, -2, -1, 0, 0}; {-4, 5, -1, 6, 2, 2, -2, -1, -5, -2, 0, 0}; {-5, 3, -4, 2, -3, -4, 3, 4, -3, -1, 0, 0}; {5, 0, 4, -3, 3, 1, -5, -5, 0, 0, 0, 0}; {2, -3, 1, 6, 0, -2, -5, 6, -5, -4, 0, 0}; {-5, 4, -2, 5, 1, 2, -2, -1, -5, -3, 0, 0}; {6, 2, -5, 1, -4, -4, 3, 3, -3, -2, 0, 0}; {-2, 5, -3, 2, -4, -4, -5, 5, -5, -5, 0, 0}; {-5, 3, -4, 2, -3, -2, 3, 3, -1, -2, 0, 0}; {6,2,-5, 1, -4, -3, 3, 3, -2, -2, 0, 0}; {-3, 6, 0, -5, 4, -5, -2, 5, -5, 0, 0, 0}; {3, -1, 4, -2, 6, 3, 3, -4, -1, 1, 0, 0}; {6, 2, -5, 1, -3, -4, 2, 3, -3, -1, 0, 0}; {5, 1, 6, 0, -4, -5, 2, 2, -3, -1, 0, 0}; {5, 0, 4, -3, 5, 6, 5, 3, 6, -5, 0, 0}; {-4, 5, -1, 6, 4, -5, -2, 5, -5, 1, 0, 0}; {-5, 4, -2, 5, 3, 6, -2, 5, -5, 0, 0, 0}; {5, 1, 6, 0, -3, 4, 4, -3, -1, 2, 0, 0}; {4, 0, 5, -1, -4, 4, 4, -3, -1, 2, 0, 0}; {4, -1, 3, -4, 4, 1, 6, 6, 0, 0, 0, 0}; {-5, 2, 6, -1, -5, 5, 6, 5, 6, -5, 0, 0}; {6, 3, -3, 4, 3, 3, 6, -3, 4, -5, 0, 0}; {1, -5,

-2, 2, -2, -5, -4, 6, 0, -2, 0, 0}; {4, 0, 5, -1, -3, 4, 4, -2, -1, 1, 0, 0}; {5, 2, -4, 3, 2, -2, -1, 6, -4, -1, 0, 0}; {2, -5, -3, 0, -5, 1, 2, 0, 5, 1, 0, 0}; {-2, 3, 5, -4, 4, -1, 0, -2, 3, 0, 0, 0}; {2, -3, 1, 6, 4, 0, 4, 4, -2, -1, 0, 0}; {2, -1, 5, 0, 1, -3, -2, 6, -5, -3, 0, 0}; {-3, 5, -2, 5, 5, 1, 0, -5, -3, -1, 0, 0}; {-2, 5, -3, 3, 2, -1, 2, 0, -4, -3, 0, 0}; {-2, 5, -3, 3, 2, -1, 2, 1, -4, -3, 0, 0}; {-4, 2, 5, -2, -4, 4, 6, 4, -1, -2, 0, 0}; {-3,4,-4,2, 1, -2, 2, 0, -4, -3, 0, 0}; {-5, -4, -2, 6, -5, -1, 5, 6, 6, 0, 0, 0}; {1, -2, 4, 0, 1, -4, 0, 5, 6, -1, 0, 0}; {-2, 6, -1, 6, 6, 1, 2, -4, -3, -1, 0, 0}; {-2, -5, 1, -3, -1, -5, -3, 4, 6, -3, 0, 0}; {-4, 4, -3, 4, 5, 0, 1, -4, -4, -2, 0, 0}; {-4, 4, -3, 4, 5, 0, 1, -4, -4, -1, 0, 0}; {-4, 4, -3, 4, 5, 1, -1, 6, -4, -2, 0, 0}; {-3, 6, 0, -4, -2, -5, -5, 3, 6, -3, 0, 0}; {4, -2, 1, 6, 5, -1, -3, 2, 0, 2, 0, 0}; {-4, 3, -5, 1, 1, -3, 2, -1, -4, -3, 0, 0}; {-3, 4, -4, 2, 2, -2, 2, 0, -4, -3, 0, 0}; {5, -1, 2, -5, 6, 2, 6, 3, -2, -1, 0, 0}; {-5, -1, 0, 3, 0, 6, 3, 4, 1, 4, 0, 0}; {-5, 3, -4, 3, 5, 0, 0, -5, -4, -2, 0, 0}; {-5, 3, -4, 3, 5, 0, 0, -5, -4, -1, 0, 0}; {6, 2, -5, 2, 4, 0, -1, 6, -4, -2, 0, 0}; {5, 1, 6, 1, 3, -1, -2, 5, -4, -2, 0, 0}; {5, 0, 4, -2, -1, 6, 4, -1, -2, -1, 0, 0}; {6, 2, -5, 2, 4, 0, -1, -5, -4, -2, 0, 0}; {-4, -4, 5, 4, -2, 2, -4, 3, -3, -3, 0, 0}; {-5, -5, 4, 3, -3, 3, -4, 3, -4, -3, 0, 0}; {6, 2, -5, 2, 5, 0, 0, -5, -4, -2, 0, 0}; {4, -1, 3, -3, -1, 6, 4, -1, -2, -1, 0, 0}; {5, 5, 2, 1, -4, 1, -4, 2, -4, -3, 0, 0}; {4, 1, -5, 3, -4, -1, -3, -1, 4, 6, 0, 0}; {-2, 6, -1, 6, -1, 2, 2, 1, 4, 5, 0, 0}; {-4, 4, -3, 4, -3, -5, -5, -1, 4, 5, 0, 0}; {-1, -5, 0, -5, 1, 3, 2, 1, 5, 5, 0, 0}; {-2, -5, 1, -3, 4, -5, -3, -3, 2, 3, 0, 0}; {-3, 6, 0, -4, 3, -5, -2, 5, -5, 0, 0, 0}; {3, -1, 4, -1, 5, 5, 3, 2, 5, 6, 0, 0}; {2, -3, 1, -5, 0, -1, -4, -5, -4, -4, 0, 0}; {3, -1, 4, -1, 5, 5, 1, 2, -4, -2, 0, 0}; {-4, 4, -3, 4, -2, -1, 4, 5, -1, 0, 0, 0}; {-5, 2, 6, 0, 6, 6, 5, 4, 6, -5, 0, 0}; {-5, 2, 6, 0, 6, 6, 6, 4, 6, -5, 0, 0}; {-3, 6, 0, -4, 4, -5, -2, 5, -5, 0, 0, 0}; {-4, 5, -1, -5, 3, -5, -2, 5, -5, 1, 0, 0}; {3, -3, 0, 5, -2, 6, 1, -3, -4, -3, 0, 0}; {2, -4, -1, 4, -3, 5, 1, -4, -4, -3, 0, 0}; {3, -2, 2, -4, 2, -1, -4, 4, 6, -4, 0, 0}; {1, -5, -2, 3, -4, 4, 0, -4, -4, -3, 0, 0}; {0, -5, -1, 5, -1, -3, -5, 5, 6, -4, 0, 0}; {-3, 2, 4, -4, 0, -4, 4, 1, -1, 0, 0, 0}; {-2, 4, -5, 0, 5, 2, -1, -3, -3, -2, 0, 0}; {4, -1, 3, -3, 3, 1, -5, 6, 0, 0, 0, 0}; {0, -5, -1, 5, -1, -2, -5, 6, -4, -4, 0, 0}; {-3, 3, 6, -1, 4, 2, -1, -3, -3, -2, 0, 0}; f-2, 5, -3, 3, -3, -4, 6, 5, -5, -4, 0, 0}; {5, -1, 2, -5, 1, -1, -3, -5, -4, -3, 0, 0}; {4, -1, 3, -3, -4, 4, 5, 5, 3, 6, 6, 0, 0}; {-5, 4, -2, 6, 3, 6, -2, 4, -5, 0, 0, 0}; {5, 2, -4, 4, 1, 5, -4, 4, 6, 0, 0, 0}; {2, -3, 1, -5, 2, -2, -4, 5, -5, -4, 0, 0}; {1, -5, -2, 3, -3, 4, 0, -3, -3, -3, 0, 0}; {-1, 4, 6, -2, 3, -2, 5, 0, -1, -1, 0, 0}; {0, 6, -3, 2, -4, 4, 0, -4, -3, -3, 0, 0}; {-2, 4, -5, 0, 6, 2, -1, -4, -4, -2, 0, 0}; {-3, 3, 6, -1, 5, 1, -2, -4, -4, -3, 0, 0}; {-1, 5, -4, 1, -5, 3, -2, -4, -4, -4, 0, 0}; {-4, 2, 5, -2, 4, 1, -2, -4, -4, -3, 0, 0}; {-5, 1, 4, -3, 3, 0, -2, -4, -4, -3, 0, 0}; {3, -2, 2, -4, 3, 1, 6, 6, 0, 0, 0, 0}; {-1, 4, 6, -2, 4, 0, 1, -2, 4, 0, 0, 0}; {3, -3, 0, 5, 0, -2, -3, -5, -4, -3, 0, 0}; {2, -3, 1, -5, 3, 5, 4, 2, 6, 6, 0, 0}; {4, 1, -5, 3, 1, 5, -4, 4, 6, 0, 0, 0}; {2, -2, 3, -2, -5, 3, 3, -4, -2, 1, 0, 0}; {-2, 4, -5, 0, -5, 2, -2, -4, -4, -4, 0, 0}; {-4, 3, -5, 1, -3, 5, 5, -3, 0, 1, 0, 0}; {1, -5, -2, 3, -2, 6, -3, -4, 2, 0, 0, 0}; {2,-3, 1, -5, 4, 1, 2, 6, -2, -1, 0, 0}; {-2, 3, 5, -3, 4, -1, 0, -2, 4, 0, 0, 0}; {-2, 5, -3, 3, 0, -5, 6, -1, 0, 2, 0, 0}; {-2, 5, -3, 3, 0, -5, 6, -2, 0, 2, 0, 0}; {0, 6, -3, 2, -2, 5, -4, -4, 1, 0, 0, 0}; {-1, 6, -2, 4, 2, 0, 2, 1, -4, -3, 0, 0}; {1, -2, 4, 0, 0, -4, -2, 5, -5, -2, 0, 0}; {-5, 2, 6, 1, -1, 6, 5, -2, -1, 1, 0, 0}; {-5, 1, 4, -2, -5, 3, 5, 4, -1, -2, 0, 0}; {-4, 5,

-1, -4, -3, 5, -3, 3, 5, -3, 0, 0}; {4, -2, 1, -5, 5, -1, -3, 2, 1, 2, 0, 0}; {-5, 2, 6, 1, 0, -3, 1, 0, -5, -3, 0, 0}; {5, -1, 2, -4, 6, 2, 5, 3, -2, -2, 0, 0}; {-5, 4, -2, -5, -3, 5, -4, 3, 5, -3, 0, 0}; {5, 1, 6, 2, 3, -2, 0, -5, -5, -2, 0, 0}; {5, 1, 6, 2, 3, -1, -2, 5, -4, -2, 0, 0}; {4, -1, 3, -2, -2, 5, 5, -1, -3, -1, 0, 0}; {0, -4, 1, -3, -1, 4, -3, -4, 6, -5, 0, 0}; {6, 3, -3, 6, -3, 5, 6, 2, 5, -3, 0, 0}; {1, -5, -2, 4, 4, -1, -5, 1, -1, 0, 0, 0}; {6, 6, 3, 3, -3, 1, -4, 2, -3, -4, 0, 0}; {4, 3, -1, -2, 3, -5, 0, 6, -1, -2, 0, 0}; {3, 2, -2, -3, 2, 6, -1, 6, -1, -2, 0, 0}; {4, 4, 1, 1, -5, 0, 6, 2, -4, -3, 0, 0}; {-1, 5, -4, 2, 3, -2, -5, 1, -1, 0, 0, 0}; {2, 1, -3, -4, 2, 6, 0, 6, -1, -2, 0, 0}; {6, 0, 3, -3, -1, -5, 4, -2, -4, -1, 0, 0}; {6, -1, 1, 6, -5, 3, -2, 5, 0, 0, 0, 0}; {3, -2, 2, -3, 1, -1, -2, 1, 6, 6, 0, 0}; {4, 0, 5, 1, 6, 5, 6, -2, 2, 4, 0, 0}; {5, 1, 6, 2, -4, -1, 0, -1, 3, 4, 0, 0}; {0, -4, 1, -3, 3, 3, 4, -3, 0, 3, 0, 0}; {0, -4, 1, -3, 4, 4, 0, 1, -4, -2, 0, 0}; {6, 0, 3, -3, 2, 0, -2, -4, -4, -3, 0, 0}; {-5, 2, 6, 1, -5, 6, 5, 4, 6, -5, 0, 0}; {4, 0, 5, 1, -4, -1, 1, -5, -3, 1, 0, 0}; {6, -1, 1, 6, -2, 6, 3, 0, -2, -1, 0, 0}; {-4, 3, -5, 2, -3, -5, 4, 5, -3, -1, 0, 0}; {4, -3, -1, 4, -3, 5, 2, 0, -2, -1, 0, 0}; {5, -1, 2, -4, 2, -1, -3, -4, -4, -3, 0, 0}; {4, -2, 1, -5, 1, -2, -3, -5, -5, -3, 0, 0}; {-1, -5, 0, -4, 4, 4, -1, 0, -4, -2, 0, 0}; {1, -5, -2, 4, -2, -3, -4, 6, -5, -4, 0, 0}; {3, -2, 2, -3, 4, 4, -4, -1, 1, 2, 0, 0}; {6, 1, 5, 0, -4, 4, 4, -4, -1, 1, 0, 0}; {2, -4, -1, 5, 1, -4, -5, -1, 1, 1, 0, 0}; {-3, 3, 6, 0, -4, 3, 6, 6, 0, -1, 0, 0}; {-4, 3, -5, 2, -1, 6, 5, -3, -1, 2, 0, 0}; {-3, 5, -2, 6, 4, 0, 1, -5, -3, -1, 0, 0}; {4, -4, -3, 2, -4, 5, -3, -5, -5, 3, 0, 0}; {-2, 4, -5, 2, 0, 4, 0, -3, -3, 0, 0, 0}; {2, 5, 5, -3, 4, -4, 0, 6, 4, 2, 0, 0}; {3, -2, 2, -2, -3, 6, 2, -4, -3, -2, 0, 0}; {3, -2, 2, -2, -3, 6, 2, -4, -3, -1, 0, 0}; {2, -3, 1, -3, -4, 6, 1, -5, -4, -2, 0, 0}; {-2, 2, 3, -4, 4, -1, 5, -5, 3, 1, 0, 0}; {1, 4, 4, -4, 4, -5, 0, 6, 4, 3, 0, 0}; {4, -4, -3, 2, -1, -5, 1, 4, 1, 2, 0, 0}; {-2, 6, -1, -4, -2, 2, -3, -4, 5, -5, 0, 0}; {-3, 5, -2, -5, -3, 2, -4, -5, 5, 6, 0, 0}; {3, 3, 0, 1, -5, 0, -5, 2, -4, -4, 0, 0}; {6, -1, 1, -5, -5, 2, -5, 3, -2, 0, 0, 0}; {3, -4, -2, 4, 4, 0, -5, 0, -3, 0, 0, 0}; {-2, -3, 5, 5, -1, 3, -3, 4, -2, -2, 0, 0}; {3, -3, 0, -5, -3, 6, 2, -4, -5, -1, 0, 0}; {2, -3, 1, -3, 1, 4, 3, 1, 5, 5, 0, 0}; {1, -4, 0, -4, 1, 4, 3, 1, 5, 5, 0, 0}; {6, -1, 1, -4, 2, 0, 4, 3, 5, 2, 0, 0}; {5, -1, 2, -2, 6, 4, -3, -1, 1, 0, 0, 0}; {1, 4, 4, -3, 2, -3, 0, -2, -4, 4, 0, 0}; {1, 5, 6, 0, 6, 3, 6, -5, 5, 2, 0, 0}; {2, -5, -3, 4, -1, -3, 1, 4, 2, 0, 0, 0}; {3, -5, -4, 2, -4, 5, -4, 6, -5, 4, 0, 0}; {2, 6, -5, 1, -5, 4, -4, 6, 6, 2, 0, 0}; {1, 6, -4, 3, -2, -4, 1, 4, 1, -1, 0, 0}; {1, 6, -4, 3, -2, -3, 1, 3, 2, 0, 0, 0}; {0, 5, -5, 2, -2, 2, -2, -3, -2, -4, 0, 0}; {2, -3, 1, -2, -4, -5, 1, -5, -4, -2, 0, 0}; {-1, 3, 4, -2, 5, 1, 5, -5, 4, 2, 0, 0}; {-2, 2, 3, -3, 4, 1, 5, 6, 5, 3, 0, 0}; {-2, 3, 5, 0, -4, 6, 0, 3, 1, -1, 0, 0}; {0, 3, 3, -4, 3, 6, 0, 6, 4, 2, 0, 0}; {-2, 0, -1, 3, -3, -1, 4, -3, -5, 3, 0, 0}; {-3, 2, 4, -1, -4, 4, 3, -5, 1, -1, 0, 0}; {-4, 1, 3, -2, -5, 4, -3, 2, 0, 0, 0, 0}; {-3, 2, 4, -1, -4, 5, 0, 3, 1, -1, 0, 0}; {-2, -2, -5, -3, 4, -1, 4, 1, -4, -4, 0, 0}; {2, -2, 3, 1, 5, -1, 3, 6, 6, 5, 0, 0}; {3, -4, -1, 6, 0, -2, 2, 2, 4, 3, 0, 0}; {2, -4, 0, -4, 3, 3, -4, -2, 1, 0, 0, 0}; {3, -4, -1, 6, 1, -2, 2, 2, 4, 3, 0, 0}; {4, -2, 2, -2, 6, 4, -3, -1, 1, 1, 0, 0}; {1, 6, -3, 4, -1, -3, 1, 2, 4, 2, 0, 0}; {2, -4, 0, -4, 4, 3, -4, -1, 0, 1, 0, 0}; {1, -5, -1, -5, 3, 2, -5, -2, 0, 0, 0, 0}; {-1, 3, 5, -1, 5, 2, 5, -5, 4, 1, 0, 0}; {0, 5, -4, 3, -2, -4, 0, 3, 2, 0, 0, 0}; {1, -5, -1, -5, 3, 2, -5, -1, -1, -1, 0, 0}; {2, -3, 2, -1, -4, -4, 2, -5, -3, -1, 0, 0}; {1, 6, -3, 4, -1, -3, 2, 2, 4, 1, 0, 0}; {-3, 0, 1, 6, -1, -5, -2, -2, -5, 3, 0, 0}; {-2, 2, 4, -2, 4, 1, 5, -5, 4, 1, 0, 0}; {0, 6, -2, 6, 2, 2, -5, -2, 0, 0, 0}; {-2, 2, 4, -2, 4, 2, 6, 4, 6, 2, 0, 0}; {-1, 4, -5, 2, -3, -4, 1, 1, 3, 0, 0, 0}; {-1, 5, -3, 5, 2, 0, 6, -2, -1, 0, 0, 0}; {-4, 0, 2, -4, 3, 1, -5, 4, 5, 1, 0, 0}; {0, -3, 4, 3, 4, 1, 5, 1, 4, -4, 0, 0}; {-5, 0, 3, -2, -5, 2, 5, 3, -1, -2, 0, 0}; {-5, 1, 5, 1, -1, -3, 3, -3, -3, -1, 0, 0}; {5, -1, 3, -1, -1, -5, 0, -3, -5, -3, 0, 0}; {-2, 4, -4, 4, -4, -5, -1, -1, 4, 3, 0, 0}; {6, -1, 2, -3, 1, -1, 3, 2, 5, 4, 0, 0}; {0, -5, 0, -3, 3, 3, 3, -3, -1, 3, 0, 0}; {1, 6, -3, 5, 0, -3, 1, 1, 3, 3, 0, 0}; {-1, 4, -5, 3, -2, -4, 0, 1, 3, 1, 0, 0}; {-3, 1, 3, -2, 4, 1, 5, 4, 5, 3, 0, 0}; {-4, 0, 2, -3, 3, 0, 4, 4, 5, 3, 0, 0}; {-4, 1, 4, 0, -5, 6, -2, 2, 1, -1, 0, 0}; {6, -2, 0, -5, 1, -1, 3, 5, 3, 1, 0, 0}; {4, -4, -2, 5, 0, -3, 2, 5, 3, 1, 0, 0}; {4, -3, 0, -4, 5, 1, 1, 5, 0, -1, 0, 0}; {-3, 4, -3, -5, -4, 2, -4, -5, 5, -5, 0, 0}; {3, 0, -5, -5, 2, -4, 1, 1, 4, -1, 0, 0}; {0, -3, 4, 5, 0, 6, -1, 0, 3, -1, 0, 0}; {3, 6, -5, 2, -5, 4, -1, 6, -5, 2, 0, 0}; {-5, -3, -3, 3, -4, 6, 0, -5, -4, 3, 0, 0}; {-2, 0, 0, 6, -1, -5, 2, -4, -4, 4, 0, 0}; {-5, 2, -5, -5, 1, 5, -5, -5, -5, 2, 0, 0}; {-4, -1, 0, -4, -1, 1, -3, 4, -5, 4, 0, 0}; {1, 1, -1, 4, 6, 3, -3, 2, 1, -5, 0, 0}; {-1, -1, -3, 2, -2, 1, -4, 3, 4, -5, 0, 0}; {2, 1, -2, 3, -1, 2, -3, 3, 5, -5, 0, 0}; {3, 0, -5, -2, 5, -3, 1, 2, -2, -2, 0, 0}; {5, -1, 3, 3, -3, 2, -2, -3, -4, 1, 0, 0}; {6, 1, 6, -5, 2, -4, 5, 6, 5, -1, 0, 0}; {4, -2, 2, 2, -3, 2, -2, -4, -4, 1, 0, 0}; {-2, 0, 0, -4, 0, -4, 2, -4, -4, 5, 0, 0}; {-3, -1, -1, -5, -1, -5, 2, -4, -4, 5, 0, 0}; {-3, -4, 5, -2, -1, -5, 0, 5, 3, -4, 0, 0}; {-5, 5, 1, 5, 5, 0, 5, -4, 5, -2, 0, 0}; {1, 1, -1, 5, 0, 3, -3, 4, 4, -4, 0, 0}; {2, -1, 6, -2, -5, 0, 3, -1, 1, 4, 0, 0}; {2, -4, 0, 1, -5, 0, -3, -4, -5, 0, 0, 0}; {0, -3, 4, -4, 6, -2, 2, -4, -2, 2, 0, 0}; {3, 1, -3, 2, 3, -2, 3, 6, 4, -2, 0, 0}; {3, 1, -3, 2, 6, 2, 5, 3, 5, -5, 0, 0}; {-2, -5, 2, -5, 0, -5, -5, 4, 6, -4, 0, 0}; {3, 0, -5, 0, 5, 3, 5, -3, 0, 2, 0, 0}; {-1, -5, 1, 5, -1, 1, 5, 5, 0, -1, 0, 0}; {0, -3, 4, -3, 4, -5, 0, 1, -3, -2, 0, 0}; {3, 0, -5, 0, -4, -2, 0, -1, 3, 5, 0, 0}; {1, -3, 3, -5, 2, 4, 3, 2, 5, 6, 0, 0}; {-5,3,-3, 1, -4, -2, 3, 3, -2, -2, 0, 0}; {-2,5,-2, 1, -4, -3, -5, 5, -5, -4, 0, 0}; {-1, -5, 1, 5, 1, -5, -5, 0, 2, 4, 0, 0}; {-2, 6, 0, 4, 0, 6, 6, -1, 1, 3, 0, 0}; {-4, 4, -2, 2, -2, 4, 5, -2, 1, 2, 0, 0}; {-4, 4, -2, 2, -2, -3, 3, 3, -3, -1, 0, 0}; {-2, -4, 4, -2, -3, 2, -4, 2, 6, 0, 0, 0}; {6, 2, -4, 0, -2, 4, 4, -2, 0, 2, 0, 0}; {4, 0, 6, -2, -4, 2, 3, -3, 0, 1, 0, 0}; {3, -2, 3, 6, 3, -3, -4, 1, 2, 3, 0, 0}; {-1, -4, 3, -3, -1, -5, -4, 5, -5, -3, 0, 0}; {-4, 3, -4, 0, 0, 6, 5, 1, -1, 1, 0, 0}; {0, -2, 6, 1, 4, 1, 3, 2, 4, -4, 0, 0}; {-2, -5, 2, -4, -2, 6, -4, 5, 6, -3, 0, 0}; {-4, 4, -2, 3, 4, -1, 0, -3, -4, -1, 0, 0}; {-3, 3, -5, -2, -2, 3, -1, 5, 3, 1, 0, 0}; {5, -1, 3, 6, 6, -1, -3, 4, 1, 2, 0, 0}; {-3, 6, 1, -5, -2, 6, -5, 5, 6, -4, 0, 0}; {-3, 6, 1, -5, -2, 6, -4, 5, 6, -3, 0, 0}; {5, 0, 5, -3, -2, 4, 4, 0, -2, 0, 0, 0}; {5, 1, -5, 0, 2, -3, -1, -4, -5, -2, 0, 0}; {-5, 4, -1, 5, -3, 6, 4, 4, -3, -1, 0, 0}; {2, -1, 6, 0, 5, 4, 2, 2, -4, -2, 0, 0}; {-3, 6, 1, -5, 0, 2, 0, 2, 4, 5, 0, 0}; {-4, 4, -2, 3, -4, -4, 4, 4, -2, -1, 0, 0}; {-4, 5, 0, 6, 0, 1, -1, 0, -5, -3, 0, 0}; {-5, 3, -3, 2, -5, -4, 4, 4, -2, -2, 0, 0}; {-3, 5, -1, 4, -2, -5, 6, -1, 1, 3, 0, 0}; {5, 1, -5, 0, 6, 6, 3, 3, -3, -2, 0, 0}; {-4, 5, 0, 6, 1, 3, -2, -1, -4, -3, 0, 0}; {6,2,-4, 1, -5, -4, 3, 3, -2, -2, 0, 0}; {5, 1, -5, 0, 6, -5, 3, 3, -3, -2, 0, 0}; {6, 2, -4, 1, -5, -4, 4, 4, -3, -2, 0, 0}; {0, -4, 2, -5, 1, 3, 3, 2, 5, 5, 0, 0}; {-4, 4, -2, 3, -3, -1, 4, 4, -1, -1, 0, 0}; {-2, 6, 0, 5, 0, 2, 2, 1, 5, 6, 0, 0}; {-1, -4, 3, -3, 5, -4, -1, 6, -5, 0, 0, 0}; {-5, 3, -3, 2, -3, -1, 3, 4, -1, -1, 0, 0}; {-4, 5, 0, 6, 2, 5, -2, 0, -4, -2, 0, 0}; {5, 0, 5, -3, 3, 1, -5, -5, 0, 0, 0, 0}; {6, 2, -4, 1, -4, -5, 2, 3, -3, -1, 0, 0}; {-2, 6, 0, 5, 0, 0, 4, 5, -1, 0, 0, 0}; {5, 1, -5, 0, -5, -5, 2, 3, -3, -2, 0, 0}; {0, -4, 2, -5, 2, 3, 3, 2, 5, 6, 0, 0}; {-2, 5, -2, 2, -4, -4, -5, 5, -5, -5, 0, 0}; {4, 0, 6, -1, 6, -5, 2, 2, -3, -2, 0, 0}; {6, 3, -2, 4, 0, 2, -2, 0, 6, -4, 0, 0}; {-2, 6, 0, 5, 1, 2, 2, 1, 5, 6, 0, 0}; {-5, 2, -5, -1, 6, 6, 6, 4, -5, -5, 0, 0}; {3, -1, 5, -2, 6, -5, 1, 2, -3, -3, 0, 0}; {-3, 6, 1, -5, 4, -5, -2, 5, -5, 0, 0, 0}; {5, 0, 5, -3, 4, 2, -5, 6, 0, 0, 0, 0}; {6, 2, -4, 1, -3, -4, 2, 3, -3, -1, 0, 0}; {5, 0, 5, -3, 5, 6, 5, 3, 6, -5, 0, 0}; {4, -1, 4, -4, 4, 5, 4, 3, 6, -5, 0, 0}; {-5, 4, -1, 5, 3, -5, -1, 5, -4, 1, 0, 0}; {3, -1, 5, -2, -5, 3, 3, -3, -1, 1, 0, 0}; {3, -1, 5, -2, -5, 6, 0, 1, -5, -2, 0, 0}; {-5, 5, 1, -4, -4, 0, 5, 1, 5, -1, 0, 0}; {1, -4, 1, 5, 2, -4, -5, 0, 1, 3, 0, 0}; {1, 6, -3, -1, 6, 1, 2, 0, 5, 1, 0, 0}; {-1, 0, -1, -3, 1, -5, 1, 3, -4, 6, 0, 0}; {-4, -5, 4, 0, 2, 6, -1, -3, 1, -3, 0, 0}; {0, -5, 0, 4, 2, -4, -5, 1, 1, 2, 0, 0}; {1, -2, 5, -1, 0, -4, -3, 6, -5, -3, 0, 0}; {1, -2, 5, 0, 1, -4, 0, 6, -5, -2, 0, 0}; {-3, 5, -1, 5, 5, 0, 1, -4, -3, -1, 0, 0}; {-3, 5, -1, 5, 5, 0, 1, -3, -3, -3, 0, 0}; {-4, 4, -2, 4, 5, 0, 0, -4, -3, -3, 0, 0}; {-3, 6, 1, -4, -2, 6, -5, 4, 6, -3, 0, 0}; {-4, 4, -2, 4, 5, 0, 1, -4, -3, -2, 0, 0}; {-3, 6, 1, -4, -2, 6, -4, 4, 6, -3, 0, 0}; {6, 2, -4, 2, 3, -2, -1, -5, -4, -2, 0, 0}; {-5, 2, -5, 0, 1, -5, 5, -1, 0, 0, 0, 0}; {-5, 3, -3, 3, 5, 0, -1, 6, -3, -1, 0, 0}; {-4, 5, 0, -5, -2, 6, 6, 3, 6, -3, 0, 0}; {6, 2, -4, 2, 4, -1, -1, -5, -4, -2, 0, 0}; {-5, 4, -1, 6, -3, 5, 6, 3, 5, -4, 0, 0}; {5, 1, -5, 1, 3, -2, -2, 6, -4, -3, 0, 0}; {6, 2, -4, 2, 4, -1, 0, -4, -4, -2, 0, 0, 0}; {4, -1, 4, -3, -2, 4, 4, 0, -2, 0, 0, 0}; {3, -2, 3, -4, -3, 3, 3, -1, -3, 0, 0, 0}; {6, 3, -2, 5, -4, 5, 5, 3, 6, -3, 0, 0}; {5, 1, -5, 1, 4, -1, -2, 6, -4, -2, 0, 0}; {5, 1, -5, 1, 4, -1, -1, -5, -4, -2, 0, 0}; {-4, 4, -2, 4, -3, 6, -5, -1, 4, 5, 0, 0}; {-5, 3, -3, 3, -4, 6, 6, -2, 1, 3, 0, 0}; {5, 1, -5, 1, 6, 6, 3, 3, -3, -2, 0, 0}; {6, 2, -4, 2, -5, -4, 3, 3, -2, -1, 0, 0}; {2, -3, 2, -5, -1, -1, -5, 6, -1, -1, 0, 0}; {3, -1, 5, -1, 4, 5, 2, 2, -4, -3, 0, 0}; {3, -1, 5, -1, 4, 5, 2, 2, -3, -3, 0, 0}; {-3, 4, -3, 2, -5, -4, -5, 5, -5, -5, 0, 0}; {-1, -4, 3, -2, 5, -4, -3, -2, 2, 3, 0, 0}; {-3, 6, 1, -4, 3, 6, -3, -3, 1, 3, 0, 0}; {6, 2, -4, 2, -4, -2, 4, 5, -2, -1, 0, 0}; {5, 2, -3, 4, -1, -1, 0, 6, -3, 1, 0, 0}; {4, 0, 6, 0, 6, 6, 2, 2, -3, -2, 0, 0}; {3, -1, 5, -1, 5, 5, 2, 2, -3, -2, 0, 0}; {3, -1, 5, -1, 5, 5, 2, 3, -4, -2, 0, 0}; {1, -4, 1, 6, -1, -2, 6, 6, -1, -1, 0, 0}; {2, -2, 4, -2, 4, 5, 2, 2, -4, -3, 0, 0}; {1, -3, 3, -3, 3, 4, 2, 2, 5, 6, 0, 0}; {1, -3, 3, -3, 3, 4, 2, 2, 6, -5, 0, 0}; {0, -4, 2, -4, 2, 3, 1, 1, -4, -3, 0, 0}; {4, 0, 6, 0, 6, -5, 2, 2, -2, -2, 0, 0}; {3, -1, 5, -1, 5, 6, 2, 2, -3, -2, 0, 0}; {2, -2, 4, -2, 5, 6, 2, 3, -4, -3, 0, 0}; {1, -3, 3, -3, 4, 5, 1, 2, -4, -3, 0, 0}; {0, -4, 2, -4, 3, 4, 1, 2, 6, -5, 0, 0}; {0, -4, 2, -4, 3, 4, 1, 2, -5, -4, 0, 0}; {-1, 6, -1, 4, -2, -2, -5, 6, -4, -4, 0, 0}; {-2, 5, -2, 3, -3, -3, 6, 5, -4, -4, 0, 0}; {5, 1, -5, 1, -4, -3, 2, 3, -2, -1, 0, 0}; {5, 0, 5, -2, 4, 5, 5, 2, -2, -3, 0, 0}; {5, 0, 5, -2, 4, 5, 6, 2, -1, -3, 0, 0}; {-5, 3, -3, 3, -2, 1, 2, 0, 4, 5, 0, 0}; {6, 2, -4, 2, -3, 0, 1, 0, 4, 5, 0, 0}; {2, -2, 4, -2, 5, 5, 2, 2, -4, -3, 0, 0}; {-1, 6, -1, 4, -2, -3, 6, 5, -5, -5, 0, 0}; {2, -2, 4, -2, 5, 5, 0, 1, -4, -2, 0, 0}; {3, -1, 5, -1, 6, 6, 2, 3, -4, -2, 0, 0}; {1, -4, 1, 6, 0, -1, 6, 6, -1, -1, 0, 0}; {2, -2, 4, -2, 5, 5, 1, 2, -4, -2, 0, 0}; {-1, 6, -1, 4, -1, -2, 5, 5, -2, -1, 0, 0}; {-5, 2, -5, 0, -5, 6, 5, 4, 6, -5, 0, 0}; {2, -2, 4, -2, 6, 6, 1, 2, -4, -2, 0, 0}; {0, -5, 0, 5, 0, -1, 5, 5, -1, -1, 0, 0}; {1, -3, 3, -3, 5, 5, 0, 1, -4, -2, 0, 0}; {0, -4, 2, -4, 4, 5, 0, 1, -4, -3, 0, 0}; {6, 1, 6, -1, 6, 6, 5, 4, 6, -5, 0, 0}; {6, 1, 6, -1, 6, 6, 5, 4, -5, -5, 0, 0}; {2, -2, 4, -2, 6, -5, 1, 2, -3, -2, 0, 0}; {5, 1, -5, 1, -3, -1, 0, -1, 4, 5, 0, 0}; {4, 0, 6, 0, -4, -1, 0, -1, 3, 4, 0, 0}; {-5, 4,

-1, 6, 3, -5, -2, 5, -5, 0, 0, 0}; {0, -4, 2, -4, 4, 2, 2, -5, -2, 1, 0, 0}; {-4, 2, 6, -2, 4, 1, -2, -4, -4, -3, 0, 0}; {-3, 5, -1, 5, 1, 0, 2, 6, -2, 1, 0, 0}; {2, -3, 2, -5, 2, 0, 6, 6, -1, 0, 0, 0}; {0, -5, 0, 5, 0, -2, 5, 5, -2, -1, 0, 0}; {-1, 6, -1, 4, 0, -2, 4, 4, -2, -1, 0, 0}; {4, -1, 4, -3, 5, 5, 5, 3, 6, -5, 0, 0}; {2, -4, 0, 4, -1, -2, -3, -5, -4, -4, 0, 0}; {1, -5, -1, 3, -2, -3, -4, 6, -4, -4, 0, 0}; {5, 2, -3, 4, 2, 5, -3, 4, -5, 0, 0, 0}; {4, 1, -4, 3, 1, 4, -4, 3, 6, -1, 0, 0}; {2, -3, 2, -5, 3, 5, 4, 2, 6, 6, 0, 0}; {2, -3, 2, -5, 3, 5, 5, 2, 6, 6, 0, 0}; {-3, 4, -3, 2, -1, -3, 3, 3, -3, -1, 0, 0}; {2, -1, 6, 1, 0, 4, -4, 3, 6, 0, 0, 0}; {-4, 3, -4, 1, -2, 6, 5, -2, 0, 2, 0, 0}; {-4, 1, 4, -5, 3, -2, -1, -2, 3, 0, 0, 0}; {-2, 6, 0, 6, 5, 1, 1, -5, -3, 0, 0, 0}; {-5, 3, -3, 4, 3, -1, 0, -5, -3, -1, 0, 0}; {5, 0, 5, -1, -3, 4, 4, -2, -1, 0, 0, 0}; {6, -1, 2, 6, 2, -4, -2, -3, 3, 0, 0, 0}; {5, -2, 1, 5, 1, -5, -2, -3, 2, 0, 0, 0}; {-3, 4, -3, 3, 1, -1, 0, 4, -3, -2, 0, 0}; {-4, 4, -2, 5, 5, 0, 2, -4, -3, -2, 0, 0}; {-3, 6, 1, -3, -2, 6, -2, 4, 6, -2, 0, 0}; {5, 0, 5, -1, -2, 5, 4, -2, -1, 0, 0, 0}; {4, -2, 2, -5, 5, -1, -3, 3, 1, 1, 0, 0}; {5, 0, 5, -1, -2, 5, 4, -1, -1, -1, 0, 0}; {3, -3, 1, 6, 4, -2, -4, 2, 1, 1, 0, 0}; {6, 2, -4, 3, 3, -1, 0, 6, -4, -1, 0, 0}; {5, 1, -5, 2, 2, -2, -1, 6, -4, -2, 0, 0}; {3, -3, 1, 6, 4, 1, 4, 2, -3, -3, 0, 0}; {6, 2, -4, 3, 4, -1, 1, -4, -4, -2, 0, 0}; {4, -2, 2, -5, 6, 0, -3, 2, 2, 0, 0, 0}; {5, 1, -5, 2, 3, -1, -2, 5, -4, -1, 0, 0}; {4, -2, 2, -5, 6, 0, -3, 3, 2, 0, 0, 0}; {3, -3, 1, 6, 5, -1, -4, 2, 1, 0, 0, 0}; {5, 1, -5, 2, 3, -1, -2, 6, -4, -2, 0, 0}; {3, -2, 3, -3, -3, 4, 2, -3, -2, 0, 0, 0}; {5, 1, -5, 2, 3, -1, -1, 6, -4, -2, 0, 0}; {4, 0, 6, 1, 2, -2, -2, 6, -4, -2, 0, 0}; {2, -4, 0, 5, 4, -2, -4, 2, 1, 1, 0, 0}; {3, -2, 3, -3, -3, 4, 3, -2, -2, -1, 0, 0}; {4, 0, 6, 1, 2, -2, -1, 6, -5, -2, 0, 0}; {3, -3, 1, 6, 5, 2, 4, 2, -3, -3, 0, 0}; {3, -1, 5, 0, 2, -3, -2, 6, -5, -2, 0, 0}; {2, -3, 2, -4, -3, 4, 2, -3, -2, -2, 0, 0}; {3, -1, 5, 0, 2, -2, -3, 5, -5, -3, 0, 0}; {3, -1, 5, 0, 2, -2, -3, 5, -5, -2, 0, 0}; {3, -1, 5, 0, 2, -2, -3, 5, -4, -2, 0, 0}; {2, -4, 0, 5, 5, -1, -4, 2, 1, 0, 0, 0}; {1, -5, -1, 4, 4, -2, -5, 2, 0, 0, 0, 0}; {3, -1, 5, 0, 2, -2, -2, 5, -5, -2, 0, 0}; {1, -4, 1, -5, -4, 3, 2, -3, -3, -1, 0, 0}; {0, 6, -2, 3, 3, -3, -5, 2, 0, 1, 0, 0}; {1, -4, 1, -5, -4, 3, 3, -2, -3, -1, 0, 0}; {2, -2, 4, -1, 1, -3, -2, 6, -5, -3, 0, 0}; {-2, 5, -2, 4, 6, -3, 3, 0, -3, -2, 0, 0}; {1, -3, 3, -2, 1, -4, -4, 4, -5, -3, 0, 0}; {1, -5, -1, 4, 5, -1, -4, 2, 1, 0, 0, 0}; {0, -5, 0, 6, -4, 3, 1, -3, -3, -2, 0, 0}; {0, -4, 2, -3, 0, -4, -5, 4, -5, -3, 0, 0}; {2, -2, 4, -1, 2, -2, -2, 5, -5, -2, 0, 0}; {0, -4, 2, -3, 0, -4, -4, 5, -5, -3, 0, 0}; {-3, 5, -1, 6, -3, -5, -4, -1, 4, 5, 0, 0}; {4, -1, 4, -2, 1, -1, -1, 1, 5, 5, 0, 0}; {-2, 5, -2, 4, -4, -3, 5, 4, -2, -2, 0, 0}; {6, 1, 6, 0, 4, 5, -3, -3, 2, 1, 0, 0}; {6, 1, 6, 0, 4, 6, 5, 3, 6, 6, 0, 0}; {5, 1, -5, 2, -5, 5, 6, -2, 3, 4, 0, 0}; {2, -3, 2, -4, 0, -2, -2, 0, 6, 6, 0, 0}; {-5, 2, -5, 1, 5, 5, -3, -3, 2, 2, 0, 0}; {0, -5, 0, 6, -1, -1, 6, 5, 0, -1, 0, 0}; {1, -3, 3, -2, 4, 5, 1, 2, -4, -2, 0, 0}; {-1, -5, 1, -4, 2, 3, 0, 1, -5, -3, 0, 0}; {-3, 4, -3, 3, -4, -4, 6, 5, -5, -5, 0, 0}; {-4, 3, -4, 2, -5, -5, 5, 4, -5, -5, 0, 0}; {6, 1, 6, 0, 5, 5, -4, -3, 2, 2, 0, 0}; {5, 1, -5, 2, -4, -1, 0, -1, 3, 4, 0, 0}; {-1, 6, -1, 5, -1, -2, 5, 4, -1, -1, 0, 0}; {-3, 4, -3, 3, -3, -4, 6, 5, -5, -4, 0, 0}; {-4, 3, -4, 2, -4, -5, 5, 4, 6, -5, 0, 0}; {0, -4, 2, -3, 4, 5, 0, 1, -4, -2, 0, 0}; {-3, 4, -3, 3, -3, -3, 4, 3, -1, -1, 0, 0}; {0, -4, 2, -3, 4, 6, 0, 1, -3, -2, 0, 0}; {4, -1, 4, -2, 4, 5, 4, 2, -2, -3, 0, 0}; {2, -3, 2, -4, 2, 4, 4, 2, 6, 6, 0, 0}; {6, 0, 4, -3, 3, 0, -3, 6, -5, -4, 0, 0}; {-3, 4, -3, 3, -2, -3, 4, 4, -2, -1, 0, 0}; {-5, 2, -5, 1, -4, -5, 4, 4, -3, -2, 0, 0}; {3, -1, 5, 0, -4, -2, -1, -1, 3, 4, 0, 0}; {0,-5,0,6, 1, 2, 3, 0, -3, -4, 0, 0}; {0, -5, 0, 6, 1, 3, 3, 1, 5, 5, 0, 0}; {0, -5, 0, 6, 1, 3, 3, 1, 6, 6, 0, 0}; {-3, 3, -5, 0, 6, 2, -1, -5, -4, -3, 0, 0}; {-4, 2, 6, -1, 5, 1, -2, -5, -4, -3, 0, 0}; {-5, 1, 5, -2, 5, 1, -3, 6, -5, -4, 0, 0}; {-5, 1, 5, -2, 5, 1, -3, -5, -4, -4, 0, 0}; {-3, 4, -3, 3, -1, -3, 3, 3, -2, -1, 0, 0}; {3, -3, 1, 6, 1, -2, -4, 6, -5, -4, 0, 0}; {-3, 3, -5, 0, -5, 5, -3, -4, 2, 1, 0, 0}; {-4, 3, -4, 2, -2, -3, 3, 3, -2, -1, 0, 0}; {5, 0, 5, -1, -5, -5, 4, 4, -4, -4, 0, 0}; {0, -5, 0, 6, 2, 2, 3, 2, 5, 6, 0, 0}; {0, -4, 2, -3, 6, -4, 0, 6, -4, 0, 0, 0}; {0, -5, 0, 6, 2, 3, 3, 2, 5, 6, 0, 0}; {-1, 6, -1, 5, 1, 2, 3, 2, 5, 5, 0, 0}; {0, -3, 4, 0, -2, 2, 6, 2, 5, -1, 0, 0}; {5, 0, 5, -1, -4, 4, 4, -3, -1, 1, 0, 0}; {-3, 3, -5, 0, -4, -5, 6, 5, -5, -4, 0, 0}; {-1, 6, -1, 5, 2, 4, 3, 1, 6, 6, 0, 0}; {-5, 2, -5, 1, -2, 1, 1, 0, 4, 5, 0, 0}; {-3, 5, -1, 6, 4, 0, 1, -5, -3, 0, 0, 0}; {-1, 5, -3, 3, -1, -5, 6, -1, 1, 1, 0, 0}; {4, -2, 2, -4, 4, 5, 5, 3, 6, 6, 0, 0}; {5, 0, 5, 0, -3, 0, 0, -1, 4, 5, 0, 0}; {6, 2, -4, 4, 2, 6, -4, 4, 6, 0, 0, 0}; {5, 0, 5, 0, -2, 5, 5, -1, -1, -1, 0, 0}; {3, -2, 3, -2, -4, 3, 3, -3, -2, 0, 0, 0}; {2, -3, 2, -3, -5, 3, 3, -3, -2, 0, 0, 0}; {-1, 5, -3, 3, 0, -5, 6, -1, 0, 1, 0, 0}; {3, -2, 3, -2, -4, -1, 0, -5, -4, 1, 0, 0}; {6, 2, -4, 4, 4, -1, 2, -5, -4, -1, 0, 0}; {6, 3, -2, -5, -4, 4, -3, 2, 4, -2, 0, 0}; {4, 0, 6, 2, 2, -2, -1, 6, -4, -2, 0, 0}; {2, -4, 0, 6, 4, -2, -3, 2, 1, 1, 0, 0}; {0, 6, -2, 4, 2, -4, -5, 1, 0, 1, 0, 0}; {2, -3, 2, -3, -4, 3, 4, -2, -2, -1, 0, 0}; {0, 6, -2, 4, 2, -3, -5, 1, 0, 1, 0, 0}; {1, -4, 1, -4, -4, 3, 2, -4, -2, 0, 0, 0}; {0, 5, -4, 1, -1, 4, 1, 6, 3, 2, 0, 0}; {2, -2, 4, 0, 1, -3, -2, 5, -5, -2, 0, 0}; {1, -4, 1, -4, -4, 3, 4, -2, -3, -1, 0, 0}; {2, -2, 4, 0, 1, -3, -1, 6, -5, -3, 0, 0}; {1, -3, 3, -1, 0, -4, -1, 5, 6, -2, 0, 0}; {-1, 4, -5, 0, -2, 4, 0, 5, 3, 2, 0, 0}; {0, -5, 0, -5, -5, 3, 1, -4, -2, -1, 0, 0}; {-1, 6, -1, 6, 6, 2, 1, -5, -3, -1, 0, 0}; {1, -5, -1, 5, 4, 0, 3, 1, -3, -3, 0, 0}; {1, -3, 3, -1, 1, -3, -3, 4, -5, -2, 0, 0}; {-1, 6, -1, 6, -5, 2, 1, -4, -3, -1, 0, 0}; {-1, 6, -1, 6, -5, 2, 2, -3, -3, -1, 0, 0}; {0, -4, 2, -2, 0, -4, -3, 5, -5, -3, 0, 0}; {-1, -5, 1, -3, -1, -4, -4, 3, 6, -3, 0, 0}; {-3, 4, -3, 4, 5, 1, 0, 6, -3, -2, 0, 0}; {2, 2, 0, 0, 6, -1, 5, 1, -5, -4, 0, 0}; {-5, 3, -3, 5, -4, 1, 6, 6, 5, 6, 0, 0}; {-2, 5, -2, 5, -5, 2, 1, -4, -3, -1, 0, 0}; {-1, 4, -5, 0, 1, -3, 6, -2, -4, 0, 0, 0}; {2, -3, 2, -3, 0, -2, -2, 1, 6, 6, 0, 0}; {1, -4, 1, -4, -1, -3, -3, 0, 6, 6, 0, 0}; {2, -2, 4, 0, 4, 4, 5, -4, 3, 4, 0, 0}; {-1, 6, -1, 6, -3, -4, -3, -1, 5, 5, 0, 0}; {-2, 5, -2, 5, -4, -5, -3, -2, 5, 5, 0, 0}; {3,-3, 1, -5, -2, -2, 1, 0, 5, 3, 0, 0}; {5, 1, -5, 3, -4, -1, 4, 5, -1, 0, 0, 0}; {2, -3, 2, -3, 1, 4, 4, 2, 5, 5, 0, 0}; {5, 0, 5, 0, 5, 6, 4, 3, 6, 6, 0, 0}; {-4, 3, -4, 3, -3, -4, 3, 3, -2, -1, 0, 0}; f-4, 3, -4, 3, -3, -4, 4, 4, -2, -1, 0, 0}; {-5, 2, -5, 2, -4, -4, 3, 3, -2, -1, 0, 0}; {5, 0, 5, 0, 6, 6, 3, 3, -3, -2, 0, 0}; {2, -3, 2, -3, 3, 3, -5, -4, 1, 2, 0, 0}; {-5, 2, -5, 2, -3, -4, 3, 3, -2, -1, 0, 0}; {1, 6, -3, 2, -5, 4, 1, -1, -2, -2, 0, 0}; {-2, 5, -2, 5, 0, 1, 2, 1, 4, 5, 0, 0}; {-3, 4, -3, 4, -1, 1, 2, 0, 4, 4, 0, 0}; {4, -3, 0, 5, -1, 6, 2, -2, -2, -2, 0, 0}; {3, -2, 3, -2, 6, 3, 3, -4, -1, 1, 0, 0}; {1, -5, -1, 5, 0, -3, -5, 5, 6, -4, 0, 0}; {5, 0, 5, 0, -4, -4, 2, 2, -2, -1, 0, 0}; {-1, 5, -3, 3, -2, -3, -5, 6, -4, -4, 0, 0}; {-4, 3, -4, 3, -1, 1, 2, 0, 4, 5, 0, 0}; {6, 1, 6, 2, -2, -1, 4, -4, -2, 0, 0, 0}; {-3, 3, -5, 2, -2, 6, 5, -2, 0, 1, 0, 0}; {-4, 1, 4, -2, 5, 1, -2, 3, 3, 3, 0, 0}; {6, -1, 2, -4, 3, 0, 4, 4, 5, 4, 0, 0}; {5, -1, 3, -2, 6, 5, -2, 0, 2, 0, 0, 0}; {2, -4, 0, -5, 3, 3, -5, -1, 0, 1, 0, 0}; {5, -2, 1, -5, 3, -4, -5, 0, 1, 1, 0, 0}; {3, -1, 5, 2, 2, -3, 1, 6, -5, -1, 0, 0}; {2, -2, 4, 1, 1, -3, 0, 6, -5, -3, 0, 0}; {1, -3, 3, 0, 0, -4, -1, 6, -5, -3, 0, 0}; {1, -3, 3, 0, 0, -4, 0, 5, 6, -1, 0, 0}; {-3, 3, -5, 2, 0, -5, 5, -1, 0, 1, 0, 0}; {-2, 3, 6, 0, -3, 4, 6, 4, 0, -2, 0, 0}; {-4, 0, 2, -5, 3, 1, -5, 4, 5, 1, 0, 0}; {2, -5, -2, 4, 2, 6, 1, -2, -3, 0, 0, 0}; {-1, 5, -3, 4, 3, -2, 2, 0, -3, -3, 0, 0}; {-2, 5, -2, 6, 6, 2, 0, -5, -3, -1, 0, 0}; {-5, 0, 3, -3, -5, 1, -2, 3, 2, 2, 0, 0}; {-2,4,-4,3,2, -2, 2, 0, -4, -3, 0, 0}; {3, -2, 3, -1, 0, 5, -2, -3, -5, -5, 0, 0}; {-3, -4, 5, 5, -1, 4, -3, 4, -3, -3, 0, 0}; {-5, 6, 3, 3, -3, 2, -4, 3, -3, -3, 0, 0}; {3, -2, 3, -1, 1, 5, -1, -2, -5, -4, 0, 0}; {1, -3, 3, 0, 3, -2, 2, 4, 5, 5, 0, 0}; {-4, -5, 4, 4, -2, 2, -4, 3, -3, -3, 0, 0}; {1, -3, 3, 0, 4, 3, 5, -3, 3, 4, 0, 0}; {-1, 5, -3, 4, -5, -4, 0, -1, 5, 2, 0, 0}; {0, -4, 2, -1, 4, 3, 5, -3, 2, 3, 0, 0}; {1, -4, 1, -3, 2, 4, 3, 2, 5, 5, 0, 0}; {0, -5, 0, -4, 2, 3, 2, 2, 5, 5, 0, 0}; {-5, 0, 3, -3, 1, 1, 2, -5, 4, 0, 0, 0}; {5, -2, 1, -5, 0, -1, 3, 2, 5, 2, 0, 0}; {-2, 4, -3, 4, -2, -3, 5, 4, -1, -1, 0, 0}; {3, -3, 2, -3, 3, 3, -4, -3, 1, 1, 0, 0}; {2, -4, 1, -4, 2, 3, -4, -3, 1, 1, 0, 0}; {1, -5, 0, -5, 1, 3, 3, 1, 5, 5, 0, 0}; {-4, 2, -5, 2, -3, -5, 5, -1, 1, 2, 0, 0}; {-3, 4, -2, 6, 2, 1, 1, -5, -2, 1, 0, 0}; {3, -3, 2, -3, 4, 4, -4, -3, 1, 2, 0, 0}; {2, -4, 1, -4, 3, 3, -4, -2, 1, 1, 0, 0}; {0, 6, -1, 6, 1, 3, 3, 1, 5, 5, 0, 0}; {-4, 2, -5, 2, -2, -5, 4, 4, -3, -1, 0, 0}; {6, 0, 5, 0, -4, 5, 4, -2, 0, 1, 0, 0}; {3, -3, 2, -3, 5, 4, -3, -1, 1, 2, 0, 0}; {0, 6, -1, 6, 2, 2, -5, -2, 0, 1, 0, 0}; {-1, 5, -2, 5, 1, 3, 3, 1, 6, 6, 0, 0}; {-3, 2, 6, 0, -5, -4, -4, 3, 0, -3, 0, 0}; {1, 6, -2, 4, 0, -3, 2, 3, 4, 3, 0, 0}; {0, -5, 1, -3, -5, -5, 1, 6, -3, -1, 0, 0}; {-4, 0, 3, -4, 3, 1, 6, 4, 6, 2, 0, 0}; {-2, 4, -3, 4, 1, 3, 2, 1, -5, -5, 0, 0}; {-2, 5, -1, -5, 5, -4, -2, 6, -5, 1, 0, 0}; {-2, 5, -1, -5, 6, -3, -3, -3, 4, 5, 0, 0}; {-4, 3, -3, 5, 4, -5, -4, -3, 2, 4, 0, 0}; {6, 0, 5, 0, -2, 5, 5, -1, -1, 0, 0, 0}; {5, -1, 4, -1, -3, 5, 4, -2, -1, 0, 0, 0}; {1, 6, -2, 4, 2, 3, -4, 5, 1, -2, 0, 0}; {-3, 5, 0, -3, -2, 6, -2, 4, 6, -2, 0, 0}; {-5, -1, 2, -5, 4, -3, 5, -4, 6, 3, 0, 0}; {-5, 2, -4, 4, 4, 0, 0, -5, -3, -2, 0, 0}; {-3, 3, -4, 3, 3, -3, 0, -1, -3, -3, 0, 0}; {3, -2, 4, 0, 2, 4, 5, -4, 4, 4, 0, 0}; {1, -4, 2, -2, 0, 4, -2, -3, -5, -4, 0, 0}; {-1, 6, 0, -4, -2, 3, -4, -4, -5, -5, 0, 0}; {-2, 5, -1, -5, -3, 3, -5, -5, 6, -5, 0, 0}; {4, -4, -1, 4, 4, 0, -4, 0, -3, 1, 0, 0}; {-5, 2, -4, 4, -5, 6, -4, -2, 4, 4, 0, 0}; {2, -4, 1, -4, -2, -3, -1, -1, 6, 6, 0, 0}; {3, -2, 4, 0, 3, 4, 6, -4, 4, 4, 0, 0}; {1, -5, 0, -5, -3, -3, -2, -1, 6, 5, 0, 0}; {1, -5, 0, -5, -3, -3, -1, -1, 5, 4, 0, 0}; {6, 1, -5, 3, -5, 5, 6, -3, 5, 5, 0, 0}; {5, 0, 6, 2, 6, 5, -5, -3, 4, 4, 0, 0}; {1, -5, 0, -5, -2, -3, -2, -1, 6, 6, 0, 0}; {6, 0, 5, 0, 4, 5, -3, -3, 3, 2, 0, 0}; {6, 0, 5, 0, 5, 5, -3, -2, 2, 2, 0, 0}; {6, 0, 5, 0, 5, 5, -2, -2, 2, 2, 0, 0}; {4, -2, 3, -2, 3, 4, -3, -3, 2, 1, 0, 0}; {-3, 3, -4, 4, -3, 6, 6, -3, 6, 5, 0, 0}; {-5, 1, 6, 2, -5, 5, 6, -4, 5, 5, 0, 0}; {-5, 1, 6, 2, -4, -5, 4, 4, -2, -1, 0, 0}; {0, 5, -3, 4, -2, -4, 0, 0, 3, 3, 0, 0}; {-2, 3, -5, 2, -4, -5, 0, 0, 3, 1, 0, 0}; {-4, 0, 3, -3, 2, 0, 4, 3, 5, 3, 0, 0}; {-3, 2, 6, 1, -5, -4, -3, 3, 1, -2, 0, 0}; {-4, 1, 5, 0, -5, -3, -5, 3, -1, -3, 0, 0}; {-5, 0, 4, -1, 6, -4, -5, 2, -1, -3, 0, 0}; {6, -1, 3, -2, 5, -5, -5, 2, 0, -3, 0, 0}; {-2, 3, -5, 2, -3, -5, 0, 1, 3, 1, 0, 0}; {-2, 3, -5, 2, -3, -5, 0, 1, 3, 2, 0, 0}; {-4, 0, 3, -3, 3, 1, 4, 3, 6, 3, 0, 0}; {-1, 5, -2, 6, 2, 2, -5, -2, 0, 0, 0, 0}; {-2, 4, -3, 5, 1, 1, 6, -3, 0, 0, 0, 0}; {-3, 3, -4, 4, 0, 0, 5, -3, -1, 0, 0, 0}; {-5, -1, 2, -4, 2, 0, 4, 4, 5, 2, 0, 0}; {4,-3, 1, -4, 4, 6, 6, 1, -1, -3, 0, 0}; {-1, 4, -4, 3, -1, -4, 1, 2, 3, 3, 0, 0}; {-5, -1, 2, -4, 3, 0, 4, 5, 5, 3, 0, 0}; {-4, 1, 5, 0, -4, 6, -1, 1, 2, 2, 0, 0}; {-5, 1, 6, 2, -1, -2, 4, -4, -2, -1, 0, 0}; {5, -3, 0, 6, 1, -1, 5, 3, 4, 0, 0, 0}; {5, -3, 0, 6, 1, -1, 5, 3, 5, 1, 0, 0}; {6, 1, -5, 4, 3, -1, 2, -4, -4, -2, 0, 0}; {3, -5, -2, 4, 0, 6, -4, 6, 2, -1, 0, 0}; {-5, -1, 2, -4, 4, 0, 5, 5, 6, 3, 0, 0}; {1, 6, -2,

5, 3, -2, -5, 1, 1, 1, 0, 0}; {-2, 4, -3, 5, 5, -5, 1, 0, -3, -4, 0, 0}; {-2, 4, -3, 5, 5, -5, 2, 0, -4, -4, 0, 0}; {-4, 1, 5, 0, -1, 0, 6, 3, -1, -3, 0, 0}; {6, 0, 5, 1, 1, -5, -1, -2, -4, -4, 0, 0}; {-5, 1, 6, 2, 3, 6, 0, -1, -4, -5, 0, 0}; {5, -1, 4, 0, 1, -5, -2, -2, -4, -4, 0, 0}; {3, 2, 0, 1, -4, 1, 6, 2, -4, -4, 0, 0}; {-5, 2, -4, 5, -4, 1, 6, -5, 6, 6, 0, 0}; {4, -2, 3, -1, 1, -5, -3, -2, -4, -4, 0, 0}; {5, 0, 6, 3, -5, 0, 4, 6, 5, 5, 0, 0}; {1, 6, -2, 5, -5, 0, -1, 4, 2, -1, 0, 0}; {2, -5, -1, 6, -3, -3, 1, 0, 5, 3, 0, 0}; {1, 6, -2, 5, -4, -3, 1, 0, 5, 2, 0, 0}; {2, -4, 1, -3, 1, 3, -4, -4, 2, 1, 0, 0}; {-5, 1, 6, 3, -4, 5, 5, -4, 6, 5, 0, 0}; {6, -2, 1, -4, 2, -1, 3, 3, 4, 3, 0, 0}; {-5, 0, 4, 0, -5, 5, -2, -1, 2, 1, 0, 0}; {-5, 0, 4, 0, -5, 6, -2, 1, 1, 1, 0, 0}; {6, -1, 3, -1, 6, 5, -2, -1, 2, 0, 0, 0}; {2, 5, -5, 1, 6, 3, -5, 6, 6, 3, 0, 0}; {4, -3, 1, -3, 4, 4, -2, -2, 1, -1, 0, 0}; {4, -4, -1, 6, 1, -2, 2, 4, 4, 2, 0, 0}; {5, -2, 2, -2, 6, 4, -3, 0, 1, 1, 0, 0}; {6, 0, 5, 2, -1, -2, 4, -4, -1, -1, 0, 0}; {4, -3, 1, -3, 5, 3, -4, 0, 0, 0, 0, 0}; {3, -3, 2, -1, -4, -5, 2, -5, -3, -1, 0, 0}; {2, -5, -1, -5, 3, 2, -5, -1, 0, 1, 0, 0}; {1, 5, -4, 3, -1, 5, -5, 5, 1, -1, 0, 0}; {1, 5, -4, 3, -1, -5, 1, 4, 4, 2, 0, 0}; {-3, 6, 2, 3, -3, 5, -3, 0, 2, -2, 0, 0}; {-3, 6, 2, 3, -3, 5, -3, -1, 2, -2, 0, 0}; {6, 2, -3, -3, 3, -2, 1, 2, 4, -1, 0, 0}; {5, 1, -4, -4, 2, -3, 1, 2, 4, -1, 0, 0}; {4, -1, 5, 4, -2, 3, 6, 6, -5, 1, 0, 0}; {5, 1, -4, -4, 3, -3, 1, 3, 4, -1, 0, 0}; {4, 0, -5, -5, 2, -4, 1, 2, 4, -1, 0, 0}; {-1, 3, 6, 2, 6, 2, -1, 0, -2, -5, 0, 0}; {-3, 2, 6, 3, -2, -3, 4, -1, 1, 1, 0, 0}; {-4, 0, 3, -1, 5, 3, -3, 4, 3, 3, 0, 0}; {-4, -1, 1, -4, 2, -1, 3, 6, 4, 2, 0, 0}; {-5, -3, -2, 4, -3, 6, 0, -5, -4, 3, 0, 0}; {1, 6, -2, -5, 3, 1, -5, -1, 1, 0, 0, 0}; {0, 6, -1, -3, -3, 4, -3, -4, 6, -4, 0, 0}; {-4, -5, 5, -3, 4, 6, 0, -5, 5, -4, 0, 0}; {6, 3, -1, 1, -5, 4, -4, -1, 1, -2, 0, 0}; {0, -3, 5, -5, 1, 2, -5, 0, -3, -1, 0, 0}; {3, -2, 4, 4, -3, 2, 6, 5, 6, 1, 0, 0}; {4, 0, -5, -4, 2, -4, 1, 2, 4, -1, 0, 0}; {2, -3, 3, 3, -4, 1, 6, 5, 6, 0, 0, 0}; {4, 0, -5, -4, 2, -3, 0, 2, 3, -1, 0, 0}; {4, 0, -5, -4, 2, -3, 0, 2, 4, -1, 0, 0}; {2, -3, 3, 3, -4, 2, 4, 5, 6, 1, 0, 0}; {1, -5, 0, -1, 3, -4, -2, -4, -4, 2, 0, 0}; {4, 0, -5, -4, 2, -3, 1, 2, 4, 0, 0, 0}; {3, -1, 6, -5, 1, -4, 0, 1, 3, -1, 0, 0}; {1, -4, 2, 2, -5, 1, 5, 4, 5, 0, 0, 0}; {1, -4, 2, 2, -5, 1, 5, 5, 5, 0, 0, 0}; {2, -2, 5, 6, 0, -5, 0, 1, 3, -1, 0, 0}; {-1, 6, 0, 0, 5, 0, 3, 4, 5, 0, 0, 0}; {3, -1, 6, -5, 2, -4, 0, 2, 3, -1, 0, 0}; {-1, 5, -2, -3, 2, -5, -3, -4, -4, 2, 0, 0}; {0, -5, 1, 1, -5, 1, 4, 4, 6, 1, 0, 0}; {-1, 6, 0, 0, 6, 0, 3, 4, 5, 0, 0, 0}; {-2, 4, -3, -4, 2, 6, -4, -5, -4, 2, 0, 0}; {-4, 1, 5, 3, -3, -3, 3, -1, 2, 2, 0, 0}; {-4, 1, 5, 3, -3, -3, 4, -1, 1, 1, 0, 0}; {5, -4, -2, 6, -2, -4, 1, -5, 5, 4, 0, 0}; {3, 6, -4, 4, -3, 6, 0, 6, 5, 4, 0, 0}; {-1, 2, 4, 0, 5, 3, -2, 4, 6, 3, 0, 0}; {-3, -1, 0, -5, -1, -4, 2, -4, -4, 4, 0, 0}; {-2, 1, 3, -1, 5, 2, -3, 4, 5, 2, 0, 0}; {-5, -3, -2, 5, -2, 6, 1, -5, -5, 4, 0, 0}; {4, 5, 5, -1, 3, -1, 5, -2, -2, 5, 0, 0}; {5, 4, 2, -5, 2, 5, -1, 5, 5, -4, 0, 0}; {5, 4, 2, -5, 2, 5, -1, 5, 5, -3, 0, 0}; {3, 1, -2, 2, -4, -2, 3, -3, -5, -2, 0, 0}; {1, -1, -4, 0, 6, -3, 2, -4, -5, -2, 0, 0}; f 2, -3, 3, 4, -4, 2, 5, 5, 6, 1, 0, 0}; {0, -5, 1, 2, 6, 1, 4, 4, 6, 1, 0, 0}; {-3, 6, 2, 5, -1, 0, 5, -2, -3, -2, 0, 0}; {-1, -3, 6, -2, 5, -5, 1, -5, 6, -3, 0, 0}; {5, -4, -2, -5, -4, 0, -4, 3, -5, 4, 0, 0}; {6, 0, 5, 5, -2, 4, 6, 6, -5, 1, 0, 0}; f 2, -4, 1, 1, -5, 0, -3, -4, -5, 0, 0, 0}; {4,-3, 1, 0, 6, 6, 1, -3, 1, 1, 0, 0}; {2, 5, -5, 4, -4, 6, -1, 6, 4, 4, 0, 0}; {2, 5, -5, 4, -4, 6, 0, -5, 4, 4, 0, 0}; {5, -1, 4, 4, -1, 1, -5, 5, -2, -1, 0, 0}; {3, -4, 0, -1, 5, 6, 1, -3, 0, 1, 0, 0}; {1, -4, 2, 3, -1, 5, 3, 4, 4, -2, 0, 0}; {0, 6, -1, -1, 6, 0, -4, -4, -5, 1, 0, 0}; {-1, 5, -2, -2, 5, -1, -5, -5, -5, 0, 0, 0}; {-3, 2, 6, 5, -1, 4, 0, -2, -3, 1, 0, 0}; {-2, 4, -3, -3, 4, -2, -5, -5, 6, -1, 0, 0}; {-1, 2, 4, 1, 6, 4, -2, 4, 5, 3, 0, 0}; {-1, 2, 4, 1, 6, 4, -2, 5, 4, 3, 0, 0}; {-4, 1, 5, 4, -1, 5, 0, -2, -2, 2, 0, 0}; {5, -5, -4, 4, -3, 6, 0, 6, -5, 4, 0, 0}; {1, 0, -2, 4, -1, 3, -3, 3, 4, -5, 0, 0}; {-4, 6, 3, -4, 3, 6, -1, 6, 6, -3, 0, 0}; {-5, 5, 2, -5, 2, 5, -1, 5, 6, -4, 0, 0}; {5, 2, -2, 2, -4, -2, 3, -3, -4, -2, 0, 0}; {4, 0, -5, -2, 3, 4, -4, 2, -1, -1, 0, 0}; {-1, 5, -2, -1, 5, -2, -4, -4, 6, 0, 0, 0}; {-2, 4, -3, -2, 4, -2, -5, -5, 6, -1, 0, 0}; {-4, 1, 5, 5, -1, 3, 0, -2, -4, 1, 0, 0}; {-5, 0, 4, 4, -2, 3, -1, -2, -5, 1, 0, 0}; {-4, 2, -5, -4, 3, -3, 6, 6, 5, -1, 0, 0}; {-4, 2, -5, -4, 3, -3, 6, 6, 6, -1, 0, 0}; {-4, 2, -5, -4, 3, -3, 6, -5, 6, 0, 0, 0}; {-5, 0, 4, 4, -2, 4, -1, -2, -4, 1, 0, 0}; {6, 2, -3, 0, -2, 2, 4, 1, 2, 5, 0, 0}; {5, -2, 2, 2, -3, 2, -2, -3, -4, 1, 0, 0}; {5, -2, 2, 2, -3, 2, -2, -2, -5, 1, 0, 0}; {-3, 4, -2, 1, 1, 6, 2, 3, 5, 3, 0, 0}; {-4, 3, -3, 0, 0, 5, 1, 3, 5, 2, 0, 0}; {-5, 4, 0, 5, -4, 4, 6, 5, 5, -4, 0, 0}; {6, 3, -1, 4, -5, 3, 6, 5, 5, -5, 0, 0}; {-5, 4, 0, 5, -3, 4, 6, 4, 6, -5, 0, 0}; {-5, 5, 2, -4, 2, 6, -1, 5, 6, -4, 0, 0}; {5, 1, -4, 0, -5, -2, 2, 3, -1, -2, 0, 0}; {3, -3, 2, 4, -1, -1, -3, 6, -2, -3, 0, 0}; 15, 2, 3, 1, 6, -2, 4, -4, 0, 0, 0}; {4, 0, -5, -1, -4, 1, 3, -3, 0, 2, 0, 0}; {4, 0, -5, -1, -4, 1, 3, -3, 1, 2, 0, 0}; {5, 1, -4, 0, -3, 3, 4, -2, 0, 2, 0, 0}; {1, -3, 4, -4, 6, 0, 2, -4, -1, 1, 0, 0}; {3, -4, 0, 1, -4, 1, -2, -4, -5, 0, 0, 0}; {-5, -3, -2, -3, 3, -1, 5, -2, 4, 4, 0, 0}; {-5, 4, 0, 6, -4, 4, 6, 5, 5, -4, 0, 0}; {-5, 4, 0, 6, -4, 4, 6, 5, 5, -3, 0, 0}; {6, 2, -3, 2, 4, -1, -1, -4, -3, -3, 0, 0}; {-5, 4, 0, 6, -3, 5, 6, 4, 6, -4, 0, 0}; {6, 3, -1, 5, -4, 4, 5, 4, 5, -4, 0, 0}; {-5, 4, 0, 6, -3, 5, -5, 4, 6, -4, 0, 0}; {5, 2, -2, 4, -5, 3, 5, 4, 5, -5, 0, 0}; {5, 2, -2, 4, -5, 3, 6, 4, 5, -4, 0, 0}; {2, -2, 5, -2, 0, -5, -3, -5, -5, -4, 0, 0}; {1, -3, 4, -3, -1, -5, -3, -5, 6, -3, 0, 0}; {-5, 3, -2, 3, -4, 6, 5, -2, 0, 2, 0, 0}; {6, 2, -3, 2, -5, 5, 5, -2, 0, 2, 0, 0}; {-5, 3, -2, 3, -4, 6, 6, -1, 1, 4, 0, 0}; {3, -1, 6, -1, 4, 5, 2, 2, -3, -2, 0, 0}; {0, -5, 1, 5, -3, -2, 6, 4, -1, -1, 0, 0}; {2, -2, 5, -2, 4, 6, 1, 1, -3, -2, 0, 0}; {3, -1, 6, -1, 5, 4, 3, -3, -1, 1, 0, 0}; {3, -1, 6, -1, 5, 4, 4, -3, -1, 2, 0, 0}; {3, -1, 6, -1, 5, 5, 0, 1, -3, -1, 0, 0}; {1, -4, 2, 6, -1, -1, 5, 4, 0, 0, 0, 0}; {4, 1, -3, 3, -2, 0, -4, -3, -5, -3, 0, 0}; {1, -3, 4, -3, 4, 5, 1, 2, -4, -3, 0, 0}; {2, -2, 5, -2, 5, -4, 1, 2, -2, -2, 0, 0}; {0, -4, 3, -4, 4, 5, 0, 1, -4, -3, 0, 0}; {6, 2, -3, 2, -2, 0, 1, 0, 4, 5, 0, 0}; {3, -2, 4, -4, 3, 4, 4, 2, 6, 6, 0, 0}; {5, 1, -4, 1, -3, -1, 1, 0, 3, 5, 0, 0}; {-1, 6, 0, 4, 0, -2, 4, 4, -2, -1, 0, 0}; {0, -4, 3, -4, 5, 4, -1, 0, -5, -2, 0, 0}; {-2, 5, -1, 3, -1, -2, 4, 4, -2, -1, 0, 0}; {-2, 6, 1, 6, 3, 4, -1, 0, -5, -3, 0, 0}; {2, -3, 3, -5, 3, 4, 4, 2, 6, -5, 0, 0}; {3, 0, -4, 2, 0, 4, -3, 3, 6, 0, 0, 0}; {0, 6, -1, 2, -2, -2, -5, 5, -4, -4, 0, 0}; {0, 6, -1, 2, -2, -2, -5, 5, -3, -3, 0, 0}; {-3, 3, -4, -1, -5, -5, 6, 4, -4, -4, 0, 0}; {1, -2, 6, 0, -1, 3, -4, 3, 6, 0, 0, 0}; {-3, 3, -4, -1, -5, -4, 6, 4, -4, -4, 0, 0}; {-4,3,-3, 1, -2, 5, 5, -2, 0, 2, 0, 0}; {-4, 3, -3, 1, -1, -2, 1, 0, 5, 6, 0, 0}; {-2, 6, 1, 6, 5, 0, 1, -4, -2, 0, 0, 0}; {5, 0, 6, -1, -3, 4, 4, -2, -1, 1, 0, 0}; {6, 2, -3, 3, 2, -2, -1, -5, -3, 0, 0, 0}; {3, -3, 2, 6, 3, -2, 6, 4, 4, 5, 0, 0}; {3, -3, 2, 6, 3, -2, 6, 5, 6, 6, 0, 0}; {4, -3, 1, 4, 0, -5, -2, -3, 2, 0, 0, 0}; {-4, 2, -5, -1, -4, -4, 6, 4, -4, -5, 0, 0}; {-3, 6, 2, -3, -3, 1, 5, 1, 4, -1, 0, 0}; {5, 1, -4, 2, 2, -3, -2, 6, -4, -1, 0, 0}; {3, -3, 2, 6, 4, 2, 4, 2, -4, -4, 0, 0}; {5, 2, -2, 5, -5, 3, 5, 3, 5, -3, 0, 0}; {3, -1, 6, 0, 1, -3, -2, -5, -5, -3, 0, 0}; {5, -1, 4, -4, -4, 1, -2, 3, 3, 1, 0, 0}; {2, -2, 5, -1, 1, -4, -3, 6, -5, -2, 0, 0}; {2, -2, 5, -1, 1, -4, -3, -5, -5, -4, 0, 0}; {2, -2, 5, -1, 1, -4, -2, -5, -5, -3, 0, 0}; {2, -2, 5, -1, 1, -4, -2, -5, -5, -2, 0, 0}; {1, -3, 4, -2, 0, -5, -3, 6, -5, -3, 0, 0}; {1, -3, 4, -2, 0, -5, -3, -5, -5, -4, 0, 0}; {-1, -5, 2, -4, -2, 5, -4, -5, 6, -4, 0, 0}; {3, 0, -4, 3, 6, 3, 4, 1, 4, -4, 0, 0}; {-1, 6, 0, 5, 6, 1, 1, -2, -3, 0, 0, 0}; {-3, 3, -4, 0, 0, 6, 5, 2, -1, 0, 0, 0}; {0, -4, 3, -3, -1, -5, -3, 6, 6, -2, 0, 0}; {-2, 5, -1, 4, 5, 0, 1, -2, -4, -2, 0, 0}; {-1, -5, 2, -4, -2, 6, -4, 6, 6, -3, 0, 0}; {1, -3, 4, -2, 1, -4, -4, 5, -5, -3, 0, 0}; {1, -3, 4, -2, 1, -4, -3, 6, -5, -3, 0, 0}; {-2, 4, -3, 1, 2, -4, 5, 2, 0, -1, 0, 0}; {5, 0, 6, -1, 1, -1, 0, 0, 5, 5, 0, 0}; {-1, 6, 0, 5, -4, 2, 0, -3, -3, -3, 0, 0}; {0, -5, 1, 6, -3, 3, 2, -3, -2, -1, 0, 0}; {3, -3, 2, 6, -4, 4, 3, -5, 6, 0, 0, 0}; {6, 2, -3, 3, -5, 5, -5, -2, 2, 3, 0, 0}; {4, 0, -5, 1, 5, 4, 5, -3, 0, 3, 0, 0}; {-5, 2, -4, 1, 5, -5, -4, 3, 0, -1, 0, 0}; {4, 0, -5, 1, 6, 4, 4, -3, -1, 2, 0, 0}; {1, -3, 4, -2, 3, 4, 1, 2, -4, -2, 0, 0}; {-1, -5, 2, -4, 2, 3, 0, 0, -4, -3, 0, 0}; {-2, 5, -1, 4, -3, -3, 5, 5, -2, -1, 0, 0}; {-3, 4, -2, 3, -4, -4, 5, 4, -1, -2, 0, 0}; {1, -3, 4, -2, 4, 5, 0, 0, -3, -2, 0, 0}; {-1, -5, 2, -4, 2, 4, -1, -1, -3, -3, 0, 0}; {-4, 3, -3, 2, -5, -4, 4, 3, -2, -2, 0, 0}; {3,-3, 2, 6, -2, -2, 0, -1, 5, 2, 0, 0}; {3, -3, 2, 6, -2, -1, -2, 5, 2, -1, 0, 0}; {5, 0, 6, -1, 4, 6, -5, 2, 0, -2, 0, 0}; {2, -2, 5, -1, 5, 3, 3, -3, -1, 2, 0, 0}; {0, -4, 3, -3, 3, 2, 3, -4, -1, 2, 0, 0}; {0, -5, 1, 6, -1, -2, 6, 5, -1, -1, 0, 0}; {-1, -5, 2, -4, 3, 4, -1, 0, -4, -2, 0, 0}; {-3, 4, -2, 3, -3, -3, 5, 5, -2, -2, 0, 0}; {-2, 6, 1, -5, 2, 3, 0, 1, -5, -3, 0, 0}; {-4, 3, -3, 2, -4, -4, 4, 4, -2, -2, 0, 0}; {-2, 6, 1, -5, 2, 4, -1, 0, -4, -3, 0, 0}; {6, 1, -5, 0, 6, -5, 5, 4, -5, -5, 0, 0}; {4, -1, 5, -2, 4, 5, 4, 2, -2, -3, 0, 0}; {3, -2, 4, -3, 3, 5, 5, 3, 6, 6, 0, 0}; {3, -1, 6, 0, -5, -2, 0, -1, 3, 4, 0, 0}; {-3, 4, -2, 3, -2, -3, 4, 4, -2, -1, 0, 0}; {-4, 3, -3, 2, -3, -3, 4, 4, -2, -2, 0, 0}; {6, 1, -5, 0, -5, -5, 3, 3, -3, -2, 0, 0}; {-1, 5, -2, 2, -4, -5, -2, -3, 3, 1, 0, 0}; {4, -1, 5, -2, 5, 6, 4, 3, -5, -5, 0, 0}; {4, -1, 5, -2, 5, 6, 4, 3, -4, -4, 0, 0}; {-1, 5, -2, 2, -4, -4, -4, 4, 0, -2, 0, 0}; {1, -4, 2, -5, 2, 4, 4, 2, 6, 6, 0, 0}; {6, 0, 5, -3, 4, 0, -1, 1, -3, -4, 0, 0}; {6, 1, -5, 0, -4, -4, 3, 3, -3, -2, 0, 0}; {6, 1, -5, 0, -4, -3, 3, 3, -2, -2, 0, 0}; {3, -2, 4, -3, 5, 6, 4, 3, -5, -5, 0, 0}; {-2, 5, -1, 4, 0, 2, 2, 1, 5, 6, 0, 0}; {6, 1, -5, 0, -3, 5, 4, -3, -1, 2, 0, 0}; {5, 0, 6, -1, -4, 4, 4, -3, -1, 1, 0, 0}; {-2, 5, -1, 4, 1, 1, 2, 1, 5, 6, 0, 0}; {3, -2, 4, -3, 6, -5, 2, 2, -3, -3, 0, 0}; {-2, 4, -3, 1, -3, -3, -5, 5, -4, -4, 0, 0}; {-4, 2, -5, -1, -5, -5, 5, 4, -5, -4, 0, 0}; {6, 0, 5, -3, 5, 6, 5, 3, -5, -5, 0, 0}; {1, 6, -2, 2, -3, 4, 0, -3, -3, -3, 0, 0}; {-1, 4, -4, 0, -5, 3, -1, -4, -3, -3, 0, 0}; {0,-5, 1, -5, 4, 4, 2, 2, -5, -4, 0, 0}; {5, -1, 4, -3, 5, 5, 3, -5, -5, 0, 0}; {6, 0, 5, -2, 6, 6, 5, 4, -5, -5, 0, 0}; {-4, 4, -1, 6, 4, -5, -3, 5, 6, 0, 0, 0}; {-4, 4, -1, 6, 4, -5, -2, 5, -5, 0, 0, 0}; {-4, 3, -3, 3, 0, 2, 1, 0, 5, 5, 0, 0}; {2, -3, 3, -3, -5, 2, 2, -3, -2, 0, 0, 0}; {2, -3, 3, -3, -5, 3, 3, -4, -2, 1, 0, 0}; {5, -1, 4, -3, 6, 5, 5, 3, -5, -4, 0, 0}; {6, 0, 5, -2, -5, 6, 5, 4, -5, -4, 0, 0}; {5, -1, 4, -3, 6, 6, 5, 3, -5, -5, 0, 0}; {5, 0, 6, 0, -2, 0, 0, -1, 4, 5, 0, 0}; {0, 6, -1, 4, 2, -4, -5, 1, 1, 1, 0, 0}; {1, -4, 2, -4, -5, 2, 2, -3, -2, 0, 0, 0}; {2, -3, 3, -3, -4, 3, 4, -1, -2, -2, 0, 0}; {-1, 5, -2, 3, 1, -3, 3, 4, 6, 6, 0, 0}; {3, -1, 6, 1, 2, -3, 0, -5, -4, -2, 0, 0}; {0,-5, 1, -5, -5, 2, 1, -4, -2, 0, 0, 0}; {-1, 4, -4, 0, -2, 3, 0, 6, 3, 2, 0, 0}; {2, -2, 5, 0, 1, -3, -2, 5, -4, -2, 0, 0}; {0, -5, 1, -5, -5, 2, 2, -3, -2, -2, 0, 0}; {0, -5, 1, -5, -5, 2, 2, -2, -2, -2, 0, 0}; {-2, 4, -3, 2, 1, -5, 6, 1, 0, 0, 0, 0}; {1, -3, 4, -1, 0, -4, -3, 6, -5, -3, 0, 0}; {-2, 4, -3, 2, 1, -5, 6, 1, 0, 1, 0, 0}; {-1, 6, 0, 6, 6, 1, 1, -3, -3, -1, 0, 0}; {-1, 6, 0, 6, 6, 1, 1, -3, -2, -2, 0, 0}; {-1, 6, 0, 6, 6, 1, 2, -2, -3, -2, 0, 0};

{-2, 5, -1, 5, 5, 0, 1, -2, -3, -2, 0, 0}; {1, -5, 0, 5, 4, 1, 3, 1, -4, -3, 0, 0}; {3, -3, 2, -5, -5, 0, -2, 2, 3, 2, 0, 0}; {5, 0, 6, 0, 1, -4, -1, -2, -5, -3, 0, 0}; {4, -1, 5, -1, 0, -5, -2, -3, -5, -4, 0, 0}; {-1, 5, -2, 3, 3, -3, 6, 1, 1, -1, 0, 0}; {-1, 5, -2, 3, 3, -3, -5, 1, 1, 1, 0, 0}; {-1, 6, 0, 6, -5, 2, 1, -4, -2, -1, 0, 0}; {0, -4, 3, -2, 0, -4, -4, 4, -5, -2, 0, 0}; {-2, 4, -3, 2, 2, -4, 6, 1, 0, 0, 0, 0}; {-1, 6, 0, 6, -5, 2, 1, -3, -2, -2, 0, 0}; {0, -4, 3, -2, 0, -4, -4, 5, -5, -3, 0, 0}; {-3, 3, -4, 1, 1, -5, 5, 1, -1, 0, 0, 0}; {-2, 5, -1, 5, 6, 1, 1, -3, -3, -2, 0, 0}; {-2, 5, -1, 5, 6, 1, 1, -3, -3, -1, 0, 0}; {-1, -5, 2, -3, -1, -5, -4, 5, -5, -3, 0, 0}; {-4, 2, -5, 0, 0, 6, 5, 1, -1, 0, 0, 0}; {-4, 2, -5, 0, 0, 6, 5, 1, -1, 1, 0, 0}; {-1, -5, 2, -3, -1, -5, -4, 6, -5, -4, 0, 0}; {-4, 3, -3, 3, 4, -1, 0, -3, -4, -1, 0, 0}; {-4, 3, -3, 3, 4, -1, 0, -3, -4, -2, 0, 0}; {-1, -5, 2, -3, -1, -5, -3, 5, 6, -3, 0, 0}; {-3, 4, -2, 4, 5, 0, 1, -3, -4, -2, 0, 0}; {-3, 4, -2, 4, 5, 0, 1, -3, -4, -1, 0, 0}; {-2, 6, 1, -4, -2, 6, -4, 5, 6, -3, 0, 0}; {0, 6, -1, 4, 5, -2, -3, 2, 1, 1, 0, 0}; {2, -2, 5, 0, 3, -2, 0, 6, -4, -2, 0, 0}; {-3, 4, -2, 4, 6, 1, 0, -5, -3, -1, 0, 0}; {-2, 6, 1, -4, -1, -5, -5, 3, 6, -3, 0, 0}; {-3, 3, -4, 1, 2, -4, 6, 1, 0, 0, 0, 0}; {-5, 2, -4, 2, 4, -1, -1, -4, -4, -2, 0, 0}; {-2, 6, 1, -4, -1, -5, -4, 4, 6, -3, 0, 0}; {-4, 3, -3, 3, 5, 0, 0, -4, -4, -2, 0, 0}; {1, -5, 0, 5, 6, 2, 2, 6, 5, -1, 0, 0}; {4, -1, 5, -1, 1, -1, -1, 0, 6, 6, 0, 0}; {1, -5, 0, 5, 6, 3, 3, 3, -4, -5, 0, 0}; {5, 1, -4, 3, 6, 6, 6, -3, 2, 4, 0, 0}; {2, -3, 3, -3, -1, -2, -2, -1, 6, 6, 0, 0}; {5, 0, 6, 0, 3, 6, 0, -2, -4, -3, 0, 0}; {5, 1, -4, 3, -5, 0, 4, 5, 5, 5, 0, 0}; {2, -3, 3, -3, 0, -2, -2, 0, 4, 5, 0, 0}; {2, -3, 3, -3, 0, -2, -2, 0, 6, 6, 0, 0}; {0, -5, 1, -5, -2, -3, -3, -1, 5, 5, 0, 0}; {-1, 6, 0, 6, -3, -4, -3, -2, 5, 5, 0, 0}; {-1, 6, 0, 6, -2, -4, -4, -1, 5, 5, 0, 0}; {-1, 6, 0, 6, -2, -4, -3, -1, 5, 5, 0, 0}; {-2, 5, -1, 5, -3, -5, -4, -2, 5, 5, 0, 0}; {-4, 3, -3, 3, -4, -4, 4, 4, -2, -1, 0, 0}; {-5, 2, -4, 2, -5, -5, 4, 3, -2, -2, 0, 0}; {2, -3, 3, -3, 2, 3, -5, -4, 1, 1, 0, 0}; {1, -5, 0, 5, -3, -2, -2, 5, 2, -1, 0, 0}; {-1, 5, -2, 3, -5, -3, -3, 4, 1, -1, 0, 0}; {-1, 6, 0, 6, 0, 0, 6, -5, -1, 0, 0, 0}; {-5, 2, -4, 2, -4, -4, 4, 5, -3, -1, 0, 0}; {4, -1, 5, -1, 6, 6, 2, 2, -3, -2, 0, 0}; {5, 0, 6, 0, -5, -4, 2, 2, -2, -2, 0, 0}; {-3, 4, -2, 4, -1, 1, 3, 2, 4, 5, 0, 0}; {4, -2, 3, -4, 3, -1, -2, 0, -3, -4, 0, 0}; {5, 1, -4, 3, 0, -1, -1, 5, -4, 0, 0, 0}; {3, -2, 4, -2, 6, 6, 3, 3, -4, -3, 0, 0}; {2, -3, 3, -3, 5, 5, 2, 2, -4, -3, 0, 0}; {0, 6, -1, 4, -1, -2, -5, 6, -4, -4, 0, 0}; {-4, 3, -3, 3, -1, 1, 2, 0, 4, 5, 0, 0}; {6, 0, 5, -2, 5, 6, 5, 3, -5, -5, 0, 0}; {0, -5, 1, -4, 4, 2, 2, -5, -2, 1, 0, 0}; {0, -5, 1, -4, 4, 4, -2, -2, 1, 2, 0, 0}; {6, -1, 3, -4, 2, 0, -2, -4, -4, -3, 0, 0}; {-5, 1, 6, 0, -5, 6, 5, 4, 6, -5, 0, 0}; {3, -3, 2, -4, 3, 4, 4, 2, 6, 6, 0, 0}; {-2, 4, -3, 3, -1, -5, 6, -2, 0, 2, 0, 0}; {-4, 2, -5, 1, -3, -5, 0, 1, 3, 3, 0, 0}; {5, -1, 4, -2, 6, 5, -2, 0, 2, 2, 0, 0}; {5, -1, 4, -2, 6, 6, 5, 4, -5, -5, 0, 0}; {4, -2, 3, -3, 5, 5, 5, 3, 6, -5, 0, 0}; {2, -5, -1, 4, -1, -2, -3, -5, -4, -4, 0, 0}; {2, -4, 1, -5, 3, 4, 4, 1, -2, -4, 0, 0}; {2, -4, 1, -5, 3, 4, 4, 2, 6, -5, 0, 0}; {4, -1, 5, 0, -3, -1, 1, -5, -3, 1, 0, 0}; {3, -2, 4, -1, -4, -2, 0, -5, -4, 1, 0, 0}; {0, 6, -1, 5, 1, 3, 3, 0, -3, -4, 0, 0}; {1, -5, 0, 6, 2, 4, 4, 2, 5, 6, 0, 0}; {3, -1, 6, 2, 0, 4, -5, 3, 5, 0, 0, 0}; {-4, 2, -5, 1, -2, 6, 5, -1, 0, 1, 0, 0}; {4, 0, -5, 3, 2, 4, -4, 3, 6, -1, 0, 0}; {1, -5, 0, 6, 3, 4, 4, 2, 6, 6, 0, 0}; {-2, 5, -1, 6, 5, 1, 1, -4, -3, -2, 0, 0}; {-3, 3, -4, 2, 0, -5, 6, 0, 0, 1, 0, 0}; {-4, 2, -5, 1, -1, 6, 5, 0, 0, 0, 0, 0}; {-4, 2, -5, 1, -1, 6, 5, 0, 0, 1, 0, 0}; {-1, 6, 0, -5, 6, -3, -1, 6, -5, 1, 0, 0}; {1, -3, 4, 0, 1, -4, 0, 6, -5, -2, 0, 0}; {0, -4, 3, -1, 0, -4, -1, 5, -5, -2, 0, 0}; {-5, 0, 4, -3, -5, 1, -2, 4, 2, 1, 0, 0}; {-4, 2, -5, 1, 0, -5, 5, 0, 0, -1, 0, 0}; {-5, 1, 6, 0, -1, 6, 5, 0, -1, 0, 0, 0}; {-4, 3, -3, 4, 4, 0, 0, -4, -3, -2, 0, 0}; {-5, 2, -4, 3, 3, 0, -1, 5, -4, -1, 0, 0}; {6, -3, -1, 2, -2, 5, 2, 3, -1, 3, 0, 0}; {-4, 3, -3, 4, 5, -5, -5, -3, 5, 5, 0, 0}; {-5, 2, -4, 3, 4, -1, 0, -4, -4, -2, 0, 0}; {5, -1, 4, -2, -2, 4, 4, 0, -2, 0, 0, 0}; {-3, 5, 0, -4, -2, 6, -4, 4, 6, -3, 0, 0}; {5, -2, 2, -5, 6, 0, -3, 4, 1, 1, 0, 0}; {-5, 2, -4, 3, 4, 0, -1, -5, -3, -1, 0, 0}; {5, -2, 2, -5, 6, 0, -2, 4, 1, 1, 0, 0}; {5, -1, 4, -2, -1, -1, 0, 0, -5, 5, 0, 0}; {2, -3, 3, -2, 0, 4, -2, -3, -5, -5, 0, 0}; {2, -3, 3, -2, 0, 5, -2, -3, -5, -4, 0, 0}; {6, 1, -5, 2, 4, -1, -2, 6, -4, -2, 0, 0}; {6, 0, 5, -1, 0, 6, 5, 0, -1, 0, 0, 0}; {6, 1, -5, 2, 4, -1, -1, -5, -4, -2, 0, 0}; {5, 0, 6, 1, 3, -1, -2, 5, -4, -2, 0, 0}; {-3, 3, -4, 2, 3, 1, 1, 2, -4, -5, 0, 0}; {-4, 2, -5, 1, 2, 0, 1, 1, -5, -5, 0, 0}; {-3, 4, -2, 5, -4, -4, -4, -2, 5, 5, 0, 0}; {6, 0, 5, -1, 1, 0, 1, 0, 6, 5, 0, 0}; {4, -1, 5, 0, 3, 4, 6, -4, 4, 4, 0, 0}; {2, -3, 3, -2, 1, 4, -2, -3, -5, -4, 0, 0}; {-1, 6, 0, -5, -2, 3, 6, -4, 0, 0, 0, 0}; {-3, 4, -2, 5, -4, -5, -4, -2, 5, 5, 0, 0}; {6, 1, -5, 2, 6, 5, 6, -4, 5, 5, 0, 0}; {0,-5, 1, -4, 0, 1, 6, -5, 1, 1, 0, 0}; {0, -5, 1, -4, 0, 2, 6, -5, 1, 1, 0, 0}; {0, 6, -1, 5, -4, -2, -2, 5, 2, -1, 0, 0}; {5, -1, 4, -2, 2, 1, -4, -5, 1, 0, 0, 0}; {-2, 4, -3, 3, -5, -5, -1, -1, 3, 2, 0, 0}; {-3, 4, -2, 5, -2, 1, 2, 0, 4, 4, 0, 0}; {3, -3, 2, -4, 1, -2, -3, -1, -4, -5, 0, 0}; {6, 0, 5, -1, 4, 3, -4, -5, 2, 1, 0, 0}; {-4, 2, -5, 1, 6, 5, -2, -2, 2, 2, 0, 0}; {-3, 3, -4, 2, -5, -5, -1, -1, 3, 2, 0, 0}; {-4, 2, -5, 1, 6, 6, -2, -2, 3, 2, 0, 0}; {-4, 3, -3, 4, -2, 0, 5, -5, -1, 0, 0, 0}; {2, -3, 3, -2, 5, 3, 2, -4, -2, 1, 0, 0}; {2, -3, 3, -2, 5, 5, 1, 1, -3, -2, 0, 0}; {-4, 3, -3, 4, -1, 0, 4, 6, -1, 1, 0, 0}; {5, -1, 4, -2, 4, 4, -4, -4, 2, 1, 0, 0}; {6, 0, 5, -1, 5, 5, -2, -2, 2, 1, 0, 0}; {2, -3, 3, -2, 5, 6, 1, 1, -2, -2, 0, 0}; and {5, -1, 4, -2, 4, 6, -5, 2, 0, -2, 0, 0}.

M may be another integer. The sequence $\{f_n\}$ including the N elements is determined, and $f_n$ is an element in the sequence $\{f_n\}$. The sequence $\{f_n\}$ is a sequence that meets a preset condition, and the preset condition is $f_n = A \cdot x_n \cdot e^{2\pi j \cdot a \cdot n}$, where a value of n ranges from 0 to N-1, A is a non-zero complex number, $a$ is a real number, $j = \sqrt{-1}$ , for an element $x_n$, $x_n = u \cdot e^{2\pi j \cdot s_n / M}$, u is a non-zero complex number, and a set of sequences $\{s_n\}$ including an element $s_n$ includes at least one of sequences in a first sequence set or at least one of equivalent sequences of the sequences in the first sequence set.

When M=16, the first sequence set may further include some or all of the following 1864 sequences (which are marked as Seq16psk_lte_idc). A value of a correlation between an LTE sequence and sequences corresponding to these sequences is less than 0.79467, and PAPRs are less than 2.0 dB. The 1864 sequences are as follows:

{6, -4, 3, 2, -6, 2, -2, -4, -6, 0, 0, 0}; {2, -1, 8, 2, -1, 5, -6, 4, 8, -1, 0, 0}; {8, -4, 3, -5, 2, 0, 2, 1, 7, 5, 0, 0}; {-6, 1, 8, 3, 3, -5, 0, -2, -5, -4, 0, 0}; {4, -7, 7, -3, -7, 3, -7, -5, 5, 4, 0, 0}; {4, -5, 2, -7, -6, 6, 3, -7, 8, -1, 0, 0}; {0, -5, 8, 1, -7, -3, 7, -7, 8, -4, 0, 0}; {4, 6, -5, 3, 4, -2, 7, -3, 8, 1, 0, 0}; {-3, 7, -2, 7, -4, -6, -5, -2, 7, 7, 0, 0}; {5, -1, -4, 2, -6, -1, -6, -5, -6, -5, 0, 0}; {-5, 4, -3, 5, -5, -7, -6, -3, 7, 7, 0, 0}; {7, -4, 3, -7, -4, 8, 4, -6, 7, 0, 0, 0}; {4, -7, 0, 7, -6, 6, 3, -7, 7, -1, 0, 0}; {5, 7, 1, 8, -5, 5, -1, 7, 4, -3, 0, 0}; {-4, 5, 3, -4, -7, -1, 6, -1, 2, 1, 0, 0}; {-5, 0, -7, -1, -3, 3, 1, 8, 7, 3, 0, 0}; {7, -3, 4, 4, -5, 3, -2, -4, -6, 1, 0, 0}; {2, -5, 3, -5, -1, -3, -3, -1, 8, 8, 0, 0}; {0, 5, -4, 3, 0, 6, 5, -6, 7, 4, 0, 0}; {-7, 0, -4, 3, 1, 7, -6, 2, 4, 1, 0, 0}; {2, -5, 2, -5, 0, -2, -3, 1, 6, 7, 0, 0}; {7, 3, -3, 6, -2, -1, 0, 8, -4, 1, 0, 0}; {-2, 7, -2, 6, 1, 4, 4, 1, 7, 7, 0, 0}; {1, 8, -1, 0, 8, -1, -5, -5, -7, 0, 0, 0}; {-4,-5,6, 7, -1, 4, -4, 5, -3, -4, 0, 0}; {1, -4, -7, 1, -7, -3, 7, -7, 8, -4, 0, 0}; {-4, 6, -3, 7, -4, -7, -6, -2, 7, 7, 0, 0}; {0, -2, 5, 0, -3, 4, -6, 3, 8, -1, 0, 0}; {-3, 6, 7, -1, 3, 0, -7, -2, -4, -2, 0, 0}; {2, -7, 2, 8, 3, 5, 5, 2, -7, -7, 0, 0}; {0, -1, -6, -6, 1, 7, -2, 7, -2, -4, 0, 0}; {0, -1, -6, -6, 1, 7, -2, 7, -3, -4, 0, 0}; {-3, -7, 2, 4, 0, 7, -4, 1, 2, -3, 0, 0}; {8, 0, 8, -2, -7, -7, 7, 5, -6, -6, 0, 0}; {8, -3, 4, 4, -3, 3, -1, -4, -5, 0, 0}; {2, -5, -6, 2, 4, -7, 2, -4, 0, -1, 0, 0}; {8, 5, -4, 5, 3, 8, -2, 7, -6, 1, 0, 0}; {8, 4, -3, 6, 3, 8, -4, 6, -7, 0, 0, 0}; {-5, 3, -6, 0, -5, -6, 8, 6, -6, -6, 0, 0}; {8, 0, 7, -3, 8, 8, 6, 5, -7, -6, 0, 0}; {-2, 6, 5, -2, -6, 0, 7, 0, 3, 2, 0, 0}; {-2, 6, 5, -2, -6, 0, 7, 0, 2, 2, 0, 0}; {1, -7, 0, 0, 8, 0, -4, -5, -7, 0, 0, 0}; {1, 7, 0, 8, 7, -2, -2, 4, 4, 2, 0, 0}; {-2, 7, 1, -4, 1, 3, 5, 8, 4, 4, 0, 0}; {3, -2, -2, 7, -5, 1, -5, 7, -3, -2, 0, 0}; {3, -2, -2, 7, -5, 1, -5, 7, -4, -3, 0, 0}; {-4, 5, 6, -1, 2, -2, 7, -2, -4, -2, 0, 0}; {8, 0, 8, -3, -6, -7, 7, 4, -6, -6, 0, 0}; {3, -6, 3, -7, 5, 6, 4, 2, -6, -6, 0, 0}; {2, -4, -3, 7, -7, 0, -7, 6, -5, -3, 0, 0}; {3, -6, 2, -7, 5, 7, 5, 2, -6, -7, 0, 0}; {-1, 4, -2, 6, 0, 4, 4, 0, 8, 8, 0, 0}; {-5, 3, -5, 4, 0, 2, 2, 0, 6, 7, 0, 0}; {-4, 4, -3, -3, 3, 0, 8, -5, 4, 1, 0, 0}; {4,-2, 7, 2, 8, -2, 4, 7, 6, 6, 0, 0}; {-6, 4, -5, 4, -3, 0, 1, 0, 5, 6, 0, 0}; {1, -6, 1, 8, 3, 5, 5, 2, 8, 8, 0, 0}; {-3, 7, 6, -1, 6, -6, 4, 8, 7, -3, 0, 0}; {3, -3, 4, -5, 4, 6, 5, 3, 8, 8, 0, 0}; {5, -3, -1, 7, 5, -6, 3, -2, -1, 1, 0, 0}; {8, -4, -3, 4, -3, 8, -1, -7, -6, 4, 0, 0}; {1, 7, -5, 5, -2, -5, 0, 4, 3, 1, 0, 0}; {5, -3, 2, -7, 1, -1, -4, -6, -5, -4, 0, 0}; {5, -1, 0, -6, -5, 2, -5, 7, -4, -3, 0, 0}; {0, 5, -5, 3, -4, -3, -4, 5, 1, -3, 0, 0}; {6, -3, 1, -5, 6, 4, -5, 0, 0, 1, 0, 0}; {8, 0, 7, -2, -7, -7, 7, 5, -6, -6, 0, 0}; {1, 5, -2, 4, -7, 5, 1, 8, 6, -1, 0, 0}; {2, 6, -1, 4, -6, 6, 1, -7, 6, 0, 0, 0}; {8, 0, -7, 3, 8, 8, -7, -5, 7, 6, 0, 0}; {-1, 5, -1, 6, 0, 3, 4, -1, -5, -7, 0, 0}; {-7, 1, 1, -6, 7, -4, 4, -2, 1, 1, 0, 0}; {0, 5, -3, 5, -3, -5, -1, -2, 7, 5, 0, 0}; {7, 0, 0, 8, -6, 3, -5, 6, -3, 0, 0, 0}; {7, 7, 2, 3, -4, 2, -5, 4, -4, -5, 0, 0}; {3, -4, 4, -2, 0, 7, -3, -4, -7, -5, 0, 0}; {0, -6, 2, 2, -6, 1, 6, 6, 8, 1, 0, 0}; {5, -4, 5, -3, 1, -2, -2, 0, -6, -7, 0, 0}; {3, -4, -5, 4, 3, -6, 1, -6, -1, -1, 0, 0}; {3, -4, 2, -6, 4, 6, 6, 3, 8, 8, 0, 0}; {-1, -6, 1, 8, 1, 4, 3, 2, 7, 8, 0, 0}; {-2, 6, -2, 6, 2, 3, 3, 1, 8, -7, 0, 0}; {2, -6, 1, -7, 3, 5, 5, 2, 8, 8, 0, 0}; {8, 0, 7, -3, 7, 8, 7, 4, -6, -6, 0, 0}; {8, 0, 7, -3, 7, 8, 7, 4, -7, -7, 0, 0}; {-7, 1, -6, 3, 8, 8, -6, -5, 7, 6, 0, 0}; {-1, 8, -1, -7, -2, -4, -4, -1, 7, 7, 0, 0}; {-1, -6, -2, -6, -3, 5, 0, 1, 6, -7, 0, 0}; {-4, 5, -6, 3, -2, 8, 7,-4,-1, 2, 0, 0}; {2, 5, -3, 3, 1, 7, 3, -7, 8, 6, 0, 0}; {6, 2, 1, -5, 2, -6, 3, 2, 8, -3, 0, 0}; {6, 0, 1, -6, -2, -5, 4, -5, -4, -4, 0, 0}; {4, -5, 2, 3, -6, 0, -3, -3, -7, 1, 0, 0}; {-7,-6, 1, 7, 7, 1, -6, -1, -7, 1, 0, 0}; {-4, 8, -2, 7, -1, 2, 3, 0, 6, 6, 0, 0}; {-7, -2, -4, 1, -5, -2, 3, -5, 8, 5, 0, 0}; {7, -1, -1, 7, -7, 3, -4, 2, -2, -1, 0, 0}; {-7, 4, 1, 8, -1, 2, -3, -7, -4, -1, 0, 0}; {6, -3, 5, -4, 8, 8, 6, 4, -6, -6, 0, 0}; {1, -2, 8, 0, -1, 5, -5, 5, -7, 0, 0, 0}; {-7, 5, -3, 7, 3, 8, -4, 6, -7, 0, 0, 0}; {-6, 3, -1, 5, -6, -4, 5, 0, 0, -1, 0, 0}; {6, -6, 3, -7, 3, -1, 2, 0, -6, 8, 0, 0}; {0, 1, -6, -1, 2, -5, 4, -5, 7, -1, 0, 0}; {7, -1, 7, 0, 1, -6, -1, -3, -6, -4, 0, 0}; {-5, 4, 8, 0, 7, 3, -2, 8, -7, -5, 0, 0}; {-4, 1, -7, 1, -6, -7, -3, -3, 4, 3, 0, 0}; {8, 2, 8, -1, 7, 8, 7, 5, 8, -7, 0, 0}; {-4, 1, 8, -2, -1, -6, 6, -4, -7, 0, 0, 0}; {-5, 3, 3, -5, -7, -2, 5, -1, 2, 1, 0, 0}; {-5, 5, -5, 2, -7, -6, 8, 6, -7, -6, 0, 0}; {7, -2, 2, -6, -3, -7, 4, -4, -7, -1, 0, 0}; {6, -2, 5, -2, 1, -1, -1, 1, -7, 8, 0, 0}; {-3,-4, 7, 2, 3, -7, 0, -3, 2, -4, 0, 0}; {-3, 5, 4, -3, -7, -2, 6, 0, 2, 0, 0, 0}; {-1, 6, -2, -2, 7, -2, -5, -6, -7, 0, 0, 0}; {-1, 6, -2, -2, 7, -2, -5, -6, 8, -1, 0, 0}; {7,-2, -7, 3, 8, 6, 8, -4, 7, 8, 0, 0}; {7, -2, -7, 3, 8, 6, 8, -4, 7, 7, 0, 0}; {-7, -1, 5, 5, -3, 4, -1, -4, -5, 1, 0, 0}; {-4, 4, 8, 0, -7, 2, -3, -6, -5, -5, 0, 0}; {0, -7, -7, 1, 2, 8, -1, -6, -1, -1, 0, 0}; {6, -1, 7, 8, 1, -7, 7, 7, 6, -2, 0, 0}; {7, -1, 5, 1, -3, -4, 4, -5, -3, -1, 0, 0}; {-4, -7, 1, 8, 6, -5, 0, -7, -4, 2, 0, 0}; {-5, 0, 6, -2, 7, -5, -6, 3, 0, -3, 0, 0}; {-5, 4, -7, 0, -6, 8, 8, 7, 8, -6, 0, 0}; {-2, 4, 3, -7, 4, 7, -2, 7, 5, 4, 0, 0}; {1, 7, -2, -1, 8, -1, -5, -5, -7, 0, 0, 0}; {-1, 4, -6, -7, 0, 7, 1, -2, -4, 2, 0, 0}; {1, -7, 0, 3, -3, -3, -5, 7, -4, -5, 0, 0}; {6, 3, -5, 4, 6, -3, 5, 8, 8, 0, 0, 0}; {0, 6, 0, -5, 0, 7, 7, 1, -3, -3, 0, 0}; {5, -3, 4, -5, 5, 7, 6, 3, -7, -7, 0, 0}; {5, -3, 3, 3, -5, 1, -3, -4, -7, 0, 0, 0}; {2, -7, -1, 0, -7, 0, -4, -6, -7, 0, 0, 0}; {-6, -3, 3, -4, -2, 8, 2, -7, 5, -1, 0, 0}; {-6, -3, 3, -4, -2, 8, 2, -7, 4, -1, 0, 0}; {-3, 5, -4, -5, 1, 8, -5, -6, -6, 2, 0, 0}; {-7, 1, 8, 3, -1, -2, 5, -5, -2, 0, 0, 0}; {-7, 1, -5, 4, -7, 8, -7, -4, 7, 7, 0, 0}; {-5, 3, -7, 0, -6, -7, 8, 6, -7, -6, 0, 0}; {4, -3, 4, 4, -4, 3, 6, 6, -7, 1, 0, 0}; {0, 6, 4, -6, 8, 1, 8, -6, 5, 4, 0, 0}; {0, 6, 4, -6, 8, 1, 8, -6, 5, 3, 0, 0}; {8, 0, 0, -7, 6, -5, 3, -2, 1, 0, 0, 0}; {6, -1, 7, 1, -5, -2, 0, -2, 4, 5, 0, 0}; {-4, 5, -4, 0, -6, -5, -7, 6, -6, -6, 0, 0}; {-2, 4, 3, -7, 4, 8, -2, 7, 4, 3, 0, 0}; {-7, -1, 5, 5, -3, 4, 0, -3, -5, 1, 0, 0}; {-6,-2,-4, 1, -3, 6, -4, -3, 7, 5, 0, 0}; {-6, 0, 7, 6, -3, 5, 0, -2, -4, 2, 0, 0}; {0, 4, -4, 2, 0, 6, 2, -7, 7, 4, 0, 0}; {1, 7, -5, 4, -2, -5, 1, 4, 4, 3, 0, 0}; {1, 7, -5, 4, -2, -5, 1, 4, 4, 2, 0, 0}; {2, -7, 3, -7, 5, 6, 3, 2, -6, -6, 0, 0}; {3, 4, -7, -2, -3, 7, 0, 3, -2, 4, 0, 0}; {6, -4, 2, 2, -5, 2, -3, -4, -7, 0, 0, 0}; {7, 2, -5, -4, 3, -4, 2, 2, 5, -1, 0, 0}; {8, 1, 8, 1, 2, -5, -1, -3, -6, -4, 0, 0}; {-7, 0, 6, 6, -3, 4, -1, -2, -6, 1, 0, 0}; {0, 8, -4, 5, 4, -1, 4, 0, -5, -3, 0, 0}; {7, -1, 6, -4, 7, 8, 7, 4, -7, -7, 0, 0}; {2, -4, 3, -6, 3, 4, 5, 3, 7, 8, 0, 0}; {2, -2, 7, -2, -8, -4, -1, -1, 3, 5, 0, 0}; {-3, 6, -2, 6, 2, 3, 2, 2, 7, 8, 0, 0}; {0, -6, -2, 8, 1, -5, -6, 6, -7, -5, 0, 0}; {6, 1, -5, -5, 3, -4, 1, 2, 5, -1, 0, 0}; {3, -5, -2, 5, -3, 6, 0, -4, -4, -4, 0, 0}; {-1, 7, 0, -7, -3, -5, -4, -2, 8, 8, 0, 0}; {-7, -1, 6, 6, -3, 3, -1, -2, -6, 1, 0, 0}; {4, -5, 1, 1, -5, 2, -3, -5, -6, 1, 0, 0}; {3, 5, -5, 2, 4, -3, 7, -3, 8, 1, 0, 0}; {8, 2, -7, -1, 7, -7, 8, 5, -7, -7, 0, 0}; {-4, 4, -6, 1, -5, -6, 8, 6, -7, -6, 0, 0}; {6, -1, 7, 6, -3, 4, 8, 7, 8, 1, 0, 0}; {7, -1, 7, -3, -7, -7, 6, 4, -6, -6, 0, 0}; {-7, -4, 8, -5, 7, -1, 3, 1, -5, 8, 0, 0}; {7, 4, 3, -6, 4, -7, 0, 7, 6, -3, 0, 0}; {-7, 2, -7, -2, 8, -7, 7, 5, -6, -6, 0, 0}; {-7, 2, -7, -2, 8, -7, 7, 5, -7, -6, 0, 0}; {3, 0, -6, 2, 0, 6, -4, 5, -6, 0, 0, 0}; {-2, 1, 8, -2, 1, -5, 5, -4, 8, 0, 0, 0}; {-3, 8, 6, -1, 6, -5, 5, 7, 7, -4, 0, 0}; {0, 5, -2, 4, 8, 4, 0, 8, 5, -1, 0, 0}; {-1, 8, 8, 1, 4, 0, 8, -1, -4, -2, 0, 0}; {8, 0, -2, 7, 6, -3, 3, -5, 0, -1, 0, 0}; {-2, 2, -6, 1, -1, 5, 2, 8, 7, 5, 0, 0}; {-2, 2, -6, 1, -1, 5, 2, 8, 7, 3, 0, 0}; {-2, 8, -1, 7, 0, 2, 3, 2, 6, 7, 0, 0}; {-5, 0, 8, -1, -3, 3, 1, 7, 7, 4, 0, 0}; {-5, 0, 8, -1, -3, 3, 1, 7, 6, 4, 0, 0}; {-5, 0, 8, -1, -3, 3, 1, 7, 6, 3, 0, 0}; {-5, 5, -1, -2, 6, -2, 3, 4, 6, 0, 0, 0};

{-4, 3, -5, -5, 4, -3, -7, -7, 8, -1, 0, 0}; {8, 2, -5, -4, 4, -4, 2, 3, 5, -1, 0, 0}; {8, -4, 3, -6, -3, 8, 4, -6, 7, 0, 0, 0}; {-6, 2, -6, 3, 0, 1, 2, 0, 6, 8, 0, 0}; {7, -1, -1, 7, 6, -5, 4, -2, 1, -1, 0, 0}; {1, 5, 7, -1, 8, 2, 8, -5, 7, 3, 0, 0}; {1, 5, 7, -1, 8, 2, 8, -5, 6, 2, 0, 0}; {3, -6, 3, -5, -1, -4, -3, -1, -7, -7, 0, 0}; {4, -1, 7, 0, -7, -4, -1, -2, 4, 5, 0, 0}; {7, -4, 4, -4, -6, 1, -1, 5, 5, 2, 0, 0}; {-5, 1, -6, 1, -5, -6, -4, -3, 8, 7, 0, 0}; {4, -4, -2, 6, 7, 1, 7, 1, -4, -1, 0, 0}; {8, 1, 3, -5, 0, -5, 3, -3, -5, -2, 0, 0}; {2, -6, -5, 4, 2, 8, 1, -4, -1, -1, 0, 0}; {2, -5, 2, -5, -1, -3, -3, 0, 8, 8, 0, 0}; {3, -4, 3, -5, 0, -3, -3, -1, -7, 8, 0, 0}; {3, 7, 3, 7, 4, -4, 1, -1, -6, 7, 0, 0}; {-5, -5, 5, 6, -1, 4, -3, 5, -3, -5, 0, 0}; {1, -6, 8, 0, 3, -7, 1, -5, -1, -1, 0, 0}; {4, -3, -3, 5, 8, 3, -4, 1, -2, -2, 0, 0}; {-5, -4, 1, 8, 8, 2, -5, 0, -6, 2, 0, 0}; {8, -2, 6, -4, 7, -7, 7, 3, -5, -6, 0, 0}; {-4, 5, 5, -2, -1, 6, -1, -7, -2, -2, 0, 0}; {-4, 8, 1, 8, 6, -5, 0, -7, -4, 2, 0, 0}; {3, -6, -5, 4, 0, -6, 1, 6, 1, 0, 0, 0}; {3, -4, 3, -6, 6, 7, 5, 3, -7, -7, 0, 0}; {2, -6, 3, 3, -6, 1, 6, 6, 7, 0, 0, 0}; {1, -2, 6, 0, -1, 4, -6, 4, 8, 0, 0, 0}; {-6, 5, 4, -3, 5, -7, 2, 7, 6, -3, 0, 0}; {-5, 3, -6, 4, -2, 1, 2, 0, 5, 6, 0, 0}; {-7, 6, -4, 6, -3, 7, -6, -2, 7, 7, 0, 0}; {0, -5, 3, -6, 2, 4, 4, 3, 7, 7, 0, 0}; {0, 3, -6, -1, 2, -3, 7, -3, -7, 2, 0, 0}; {-7, -4, 6, -6, 7, -1, 4, 0, -4, 8, 0, 0}; {0, -7, -7, 2, 2, 8, 1, -5, -1, -1, 0, 0}; {3, -5, 3, 4, -1, 8, 4, 6, 6, -2, 0, 0}; {-6, -2, 5, -5, -2, -6, 5, -5, 8, 1, 0, 0}; {8, -3, -2, 5, -4, 8, -4, -6, -6, 5, 0, 0}; {2, -7, -4, 6, -1, -4, 2, 2, 5, 1, 0, 0}; {-3, 6, -5, 2, -5, -6, -7, 7, -7, -6, 0, 0}; {7, 0, -3, 3, 8, -5, 4, -2, 0, 0, 0, 0}; {7, 0, -3, 3, 8, -5, 4, -2, 0, -1, 0, 0}; {2, -6, -7, 0, 1, -7, 2, 8, 2, 2, 0, 0}; {4, -2, 5, -3, 5, 6, 5, 4, 7, 8, 0, 0}; {3, -3, -4, 5, -7, 1, -7, 6, -4, -1, 0, 0}; {1, -6, 8, -2, 4, 6, 0, -4, -1, 1, 0, 0}; {-2, -3, -7, 8, 0, 6, -3, 6, -3, -4, 0, 0}; {3, -7, 2, 8, 3, 6, 5, 1, -7, -7, 0, 0}; {-7, 2, -5, 4, -7, -7, -7, -4, 7, 7, 0, 0}; {-1, 6, -2, -7, -3, -5, -3, -2, 8, 7, 0, 0}; {-7, 3, 2, -7, -1, 3, -3, -7, -3, -1, 0, 0}; {-5, 3, 1, 8, -7, -2, 6, -1, 2, 0, 0, 0}; {8, 0, 8, 7, -2, 5, -7, -7, -7, 1, 0, 0}; {-5, 3, -2, 7, -7, -3, -6, -3, 4, 4, 0, 0}; {0, -4, 6, 0, -2, 3, 8, 3, 6, -1, 0, 0}; {5, -3, -3, 6, 4, -6, 2, -4, 0, 0, 0, 0}; {-4, 6, 4, -5, 1, 5, -2, -6, -2, 0, 0, 0}; {6, -2, 8, 0, 6, 6, 8, -6, 6, 6, 0, 0}; {-2, 5, -5, 7, 2, 0, 7, -3, -1, 0, 0, 0}; {-2, 5, -5, 7, 2, 0, 7, -3, -1, -1, 0, 0}; {-2, -7, -4, 8, 1, -5, -7, 4, -7, -3, 0, 0}; {-6, 3, -3, -3, 4, -3, 3, 4, 5, -1, 0, 0}; {1, 8, -1, -1, 8, 1, -5, -6, -6, 1, 0, 0}; {-7, 1, 3, -4, -4, 4, -4, 8, -2, -1, 0, 0}; {3, -5, 1, 1, -6, 2, -4, -5, -6, 1, 0, 0}; {-5, 1, 0, 6, 4, -2, 5, 8, 3, 3, 0, 0}; {7, -1, 7, 6, -3, 4, 8, 7, 8, 0, 0, 0}; {-7, 1, 8, 0, 3, 0, 0, 1, -6, -7, 0, 0}; {0, 5, 6, -2, 7, 2, 8, -6, 6, 2, 0, 0}; {4, -3, 4, -1, 0, 8, -3, -4, -7, -5, 0, 0}; {-5, -2, 4, -3, -2, 8, 2, -7, 5, -1, 0, 0}; {3, -4, 3, -6, 4, 6, 6, 3, 8, 8, 0, 0}; {1, -6, -3, 6, -5, 7, 2, -6, -7, -2, 0, 0}; {-3, 8, 0, 7, 0, 2, 3, 2, 6, 7, 0, 0}; {0, -7, -3, 5, -3, -5, -7, 8, -7, -5, 0, 0}; {-3, 4, -4, 6, -5, -6, -5, -3, 7, 7, 0, 0}; {-7, 3, -7, -1, 8, -7, 8, 5, -7, -7, 0, 0}; {-7, -1, -7, 5, -6, 3, 4, -2, -4, -5, 0, 0}; {-2, 6, 5, -2, 4, -3, 0, -4, -5, -4, 0, 0}; {-1, 7, -2, -1, 7, -1, -5, -6, -7, 0, 0, 0}; {4, -7, -5, 3, -6, 6, -6, 8, -7, 5, 0, 0}; {7, -3, 4, 3, -4, 3, -2, -4, -5, 1, 0, 0}; {2, 8, 1, 8, 3, 5, 5, 1, -7, -7, 0, 0}; {2, -7, 3, -1, 5, 4, 7, -6, 6, 6, 0, 0}; {-6, 4, -6, 1, 8, -7, 7, 5, -7, -7, 0, 0}; {-2, 6, 2, -4, 4, -6, 0, 4, 4, 4, 0, 0}; {-6, -1, -3, 2, -4, -1, 3, -5, 8, 5, 0, 0}; {-6, -1, -3, 2, -4, -1, 3, -5, 7, 5, 0, 0}; {-5, 6, -2, 6, -2, 1, 2, 0, 5, 6, 0, 0}; {1, 5, -5, -6, 1, 8, 2, 0, -3, 2, 0, 0}; {-2, -7, 1, -6, 7, -5, -2, 8, -6, 1, 0, 0}; {0, 4, -6, 0, 1, -4, 8, -3, -6, 1, 0, 0}; {8, 0, 1, -6, 6, -5, 4, -1, -1, 0, 0, 0}; {-4, 4, 5, -1, -2, 5, -2, 8, -2, -1, 0, 0}; {1, -7, -6, 3, 1, 8, 0, -6, -1, 0, 0, 0}; {5, -3, 7, 1, 7, 6, 8, -5, 6, 6, 0, 0}; {7, 8, 0, -6, -4, 6, -1, 5, 3, -3, 0, 0}; {6, -3, 3, 3, -5, 2, -3, -4, -6, 0, 0, 0}; {6, -3, 3, 3, -5, 2, -3, -4, -7, 0, 0, 0}; {-3, 8, 7, -1, 7, -5, 7, 7, 8, -5, 0, 0}; {-6, 2, -6, 1, 3, 0, 0, 1, -6, -6, 0, 0}; {6, 1, -7, 1, -4, -1, 0, -1, 5, 6, 0, 0}; {-1, -5, 4, 5, 0, 7, -2, 3, 3, -3, 0, 0}; {5, -4, 2, 1, -6, 1, -3, -5, -6, 0, 0, 0}; {-7, 0, -7, 4, -7, 8, -6, -4, 7, 6, 0, 0}; {2, 6, -3, 6, -7, 4, -1, 7, 4, -2, 0, 0}; {-7, 5, -4, 2, -2, -6, 2, 4, -4, 0, 0, 0}; {3, 8, 1, 8, 3, 7, 5, 1, -6, -7, 0, 0}; {2, -5, -5, 3, 6, 2, -5, 1, -3, -1, 0, 0}; {-4, 5, -1, -2, 6, 0, 4, 4, 7, 0, 0, 0}; {-6, 3, -5, 1, 3, 0, 1, 1, 7, 7, 0, 0}; {-7, -2, 5, 4, -4, 4, -1, -3, -5, 0, 0, 0}; {-4, 0, -3, 3, -2, 8, -4, -3, 8, 6, 0, 0}; {6, -4, 4, -7, -5, 6, 4, -6, 8, 0, 0, 0}; {4, -3, 7, 0, 5, 6, 7, -7, 6, 6, 0, 0}; {1, 8, 8, 0, -5, 0, 8, 2, 2, 2, 0, 0}; {1, 8, 8, 0, -5, 0, 8, 2, 2, 1, 0, 0}; {4, -4, -5, 3, -7, 1, 3, -1, -4, -2, 0, 0}; {5, -2, 5, -5, 5, 7, 6, 3, -7, -7, 0, 0}; {5, -2, 5, -5, 5, 7, 6, 3, 8, 8, 0, 0}; {-1, -7, 1, 7, 2, 4, 3, 2, 7, 8, 0, 0}; {0, 8, 0, -7, -3, -4, -3, -2, 8, 7, 0, 0}; {4, -5, -3, 6, 0, -4, 2, 6, 2, 0, 0, 0}; {7, -3, 3, 3, -4, 3, -3, -3, -5, 1, 0, 0}; {2, 6, -1, 3, -6, 5, 2, -7, 7, -1, 0, 0}; {4, -1, -7, -6, 1, -5, 0, 1, 6, -1, 0, 0}; {-6, -1, 6, 5, -4, 4, -1, -3, -5, 1, 0, 0}; {-2, 2, -5, 3, -5, -5, -4, -3, -7, 8, 0, 0}; {8, 0, 8, -3, 8, -7, 6, 4, -5, -5, 0, 0}; {8, 0, 8, -3, 8, -7, 6, 4, -6, -6, 0, 0}; {1, 7, -2, 7, 3, 6, 4, 1, -4, -5, 0, 0}; {6, 5, -2, -6, 8, -2, 5, 0, 5, -3, 0, 0}; {0, 8, 1, 1, 8, 1, 5, 6, 7, 0, 0, 0}; {-4, 6, 6, -1, 0, 6, -1, -6, -1, -1, 0, 0}; {6, -4, -6, -1, -6, -4, 1, -7, -7, 5, 0, 0}; {-3,-7, 0, -4, 6, -5, -2, 7, -7, 1, 0, 0}; {-7, -1, 0, -7, 3, -2, 4, 8, 3, 1, 0, 0}; {7, 3, -6, 3, -5, -2, 0, -1, 5, 6, 0, 0}; {5, -3, 1, 7, -2, 8, 2, -4, -5, -4, 0, 0}; {-6, 3, -5, 2, 0, 2, 2, -1, 6, 7, 0, 0}; {3, -4, 5, 0, 5, 6, 7, -6, 5, 5, 0, 0}; {-1, 7, -7, 0, 4, -1, 8, 0, -3, -2, 0, 0}; {5, -3, -2, 6, 4, -6, 1, -4, 0, 0, 0, 0}; {-2, 1, 7, -1, 0, -5, 4, -5, 6, 0, 0, 0}; {1, 1, -6, 6, 5, -4, 4, -1, 5, -2, 0, 0}; {-5, 5, -2, -1, 6, -2, 3, 5, 5, -1, 0, 0}; {7, 0, -7, 2, 8, 8, 8, -3, 2, 4, 0, 0}; {8, 0, -6, -1, 2, 4, -4, 5, 4, 1, 0, 0}; {-7, 2, 2, -6, -3, 4, -3, 8, -2, -1, 0, 0}; {-7, 2, 8, -2, 8, -7, 8, 5, -7, -7, 0, 0}; {-2, -3, 8, 8, -1, 6, -3, 6, -3, -4, 0, 0}; {-1, 7, -1, 5, 6, 3, 3, 3, 8, 8, 0, 0}; {-7, -1, -7, 1, 2, 5, 0, 1, 7, 5, 0, 0}; {-4, 3, -5, -5, 5, -2, 8, -7, -7, 0, 0, 0}; {-6, 4, -3, -3, 5, -1, 2, 3, 6, -1, 0, 0}; {5, -3, -2, 7, 4, -7, 2, -3, 0, 0, 0, 0}; {0, 8, -1, 8, 3, 3, 4, 2, 6, 8, 0, 0}; {3, -3, -5, 2, 6, -6, 3, -3, 0, -2, 0, 0}; {-4, -1, 7, -4, 0, -5, 5, -4, 8, 1, 0, 0}; {6, 0, -6, -5, 3, -4, 1, 3, 4, -1, 0, 0}; {-6, 4, -3, 4, -1, 1, 1, 1, 6, 7, 0, 0}; {5, -1, -7, -6, 1, -6, 1, 2, 4, -2, 0, 0}; {0, 8, 7, -2, -1, -7, 1, 6, 1, 1, 0, 0}; {4, -4, -4, 5, 3, -6, 2, -5, 0, 0, 0, 0}; {-4, 5, 5, -2, 0, 6, -1, -6, -2, -2, 0, 0}; {4, 0, 8, -2, 7, -4, 1, 2, -3, -4, 0, 0}; {2, -7, -6, 3, -2, -6, 1, 5, 2, 0, 0, 0}; {5, 5, 1, 2, -6, 1, -7, 3, -5, -5, 0, 0}; {-2, 7, 6, -2, 1, 7, -1, -6, -2, -2, 0, 0}; {-3, 7, -1, 6, 0, 2, 3, 1, 7, 8, 0, 0}; {-3, 7, -1, 6, 0, 2, 3, 1, 6, 7, 0, 0}; {4, -4, -4, -6, 6, 6, 5, 3, -7, -6, 0, 0}; {-4, 1, 8, 7, -2, 5, 0, -2, -5, 1, 0, 0}; {6, 2, -5, 5, 2, 6, -5, 5, 8, -1, 0, 0}; {-3, 7, -2, 7, -3, -6, -5, -1, 5, 6, 0, 0}; {-7, -1, -2, 5, 3, -3, 4, 8, 2, 2, 0, 0}; {4, -1, -4, 4, -4, -1, 8, -5, -7, -2, 0, 0}; {5, -2, 6, 6, -5, 3, 8, 7, 7, 0, 0, 0}; {1, -6, -7, 0, 4, 8, 1, -4, -1, -1, 0, 0}; {-6, 4, -3, -2, 6, -2, 2, 4, 6, 0, 0, 0}; {6, 0, 1, -6, -4, 3, -5, 7, -3, -3, 0, 0}; {-5, 2, -5, 3, -2, 1, 2, -2, -6, -7, 0, 0}; {1, -4, 6, 7, 0, 8, -1, 0, 4, -1, 0, 0}; {-1, 7, -1, -1, 8, -1, -5, -6, -7, 0, 0, 0}; {-1, 3, -2, 8, -3, 4, 6, 0, -2, -5, 0, 0}; {-1, 5, -2, 6, 0, 4, 4, -1, -6, -7, 0, 0}; {8, -1, -2, 6, 0, 4, -5, 5, 2, 2, 0, 0}; {-7, 1, -1, 6, 8, -3, 4, -2, 1, 0, 0, 0}; {4, -1, 8, -7, 2, -5, 0, 2, 5, -1, 0, 0}; {5, -3, 5, 1, 6, 5, -7, -5, 5, 5, 0, 0}; {-7, 1, 6, -4, 4, 0, -3, -6, -6, -4, 0, 0}; {4, -7, 0, 7, -6, 6, 2, -7, 6, -1, 0, 0}; {7, 0, 0, 7, -6, 4, -4, 3, -1, -1, 0, 0}; {5, -1, -4, 4, -4, -1, -6, -6, -7, -3, 0, 0}; {1, -5, 2, -5, -1, -4, -4, 0, 8, 8, 0, 0}; {-7, 6, -3, 6, -7, 3, -6, 8, 7, -7, 0, 0}; {-6, 0, 6, -1, -7, -5, -7, 4, -1, -4, 0, 0}; {3, -5, -5, 3, 6, 2, -5, 0, -3, -1, 0, 0}; {5, -5, 2, 2, -6, 1, -3, -4, -6, 0, 0, 0}; {-5, 2, -7, -6, 3, -4, 8, -7, 7, -2, 0, 0}; {6, -6, 2, 8, -4, 7, 2, -7, 6, -1, 0, 0}; {3, 8, 7, -3, 7, -5, 0, -7, 6, 4, 0, 0}; {3, 4, 8, -2, -3, 7, -1, 3, -3, 4, 0, 0}; {6, -2, 6, -4, -7, 8, 6, 4, -6, -6, 0, 0}; {-1, 4, -4, 2, 0, 5, 3, -7, 7, 4, 0, 0}; {6, 1, -1, 6, -3, 1, -4, 8, -4, -1, 0, 0}; {0, -4, -7, 2, 8, -4, 4, -7, 7, -3, 0, 0}; {-7, 2, 3, -4, 0, -3, 6, -3, -5, -2, 0, 0}; {-7, 2, 3, -4, 0, -3, 6, -3, -5, -3, 0, 0}; {-5, 5, 5, -2, 2, -3, 6, -3, -4, -2, 0, 0}; {-5, 3, 3, -6, -4, 6, -2, 4, 0, 0, 0, 0}; {-7, 2, -6, 4, -7, 8, -6, -4, 6, 6, 0, 0}; {8, -1, 5, 5, -4, 3, -2, -4, -6, 1, 0, 0}; {6, -1, -7, 3, -7, -1, 4, 7, 6, 6, 0, 0}; {2, -7, 2, -7, 6, 6, 5, 2, 8, -7, 0, 0}; {-3, 6, 6, -1, 2, -1, 8, -2, -4, -3, 0, 0}; {1, 6, -1, 5, -2, -4, 0, -1, 7, 5, 0, 0}; {8, -3, 7, -2, 7, 7, -5, -6, 8, 7, 0, 0}; {4, -5, 4, 1, 6, 5, 8, -5, 6, 5, 0, 0}; {7, -3, -3, 5, -1, 3, -5, 5, 2, 1, 0, 0}; {5, -2, 7, 6, -3, 4, 8, 7, -7, 2, 0, 0}; {5, 2, -6, 5, 1, 6, -6, 5, 8, 0, 0, 0}; {0, -7, -1, 6, -2, -4, -7, 7, -7, -6, 0, 0}; {-1, -6, 1, 8, 1, 4, 5, 2, 7, 7, 0, 0}; {4, -2, -1, -7, -3, -6, 4, -5, -6, -4, 0, 0}; {8, 0, 8, 7, -2, 5, -7, 8, -7, 1, 0, 0}; {3, -5, 4, 5, -2, 8, 5, 6, 6, -2, 0, 0}; {-7, 6, -1, 1, -3, 4, -5, 1, 1, -4, 0, 0}; {-1, -7, 5, -5, 2, 5, 0, -4, -3, -1, 0, 0}; {-4, 5, 5, -3, 1, 5, -1, -6, -2, -2, 0, 0}; {8, 0, 0, -6, 6, -4, 5, -3, 0, 1, 0, 0}; {6, -4, 3, 3, -5, 1, -2, -3, -6, 1, 0, 0}; {8, 2, -4, -7, -1, 0, 3, 7, 2, 3, 0, 0}; {-4, 6, -1, -1, 6, -1, 4, 4, 6, 0, 0, 0}; {5, -5, 2, 8, -6, 7, 3, -6, 7, 0, 0, 0}; {2, -7, 0, -1, -7, 1, -5, -5, -7, 0, 0, 0}; {2, 6, -3, 5, 1, 7, 5, -7, 7, 5, 0, 0}; {4, -1, -3, 4, -5, 0, -6, 7, -4, -1, 0, 0}; {5, -3, -7, 2, 6, -5, 8, -5, 2, 3, 0, 0}; {3, -6, -7, 1, 0, -6, 2, 7, 1, 1, 0, 0}; {4, -4, 5, -6, 6, 7, 4, 3, -6, -6, 0, 0}; {-7, 2, -7, 3, -3, 1, 2, -1, 5, 6, 0, 0}; {-5, 1, -5, 3, -2, 2, 2, -1, 7, 7, 0, 0}; {2, 7, -4, 5, -3, -4, 3, 1, 5, 1, 0, 0}; {1, -4, -3, 5, -2, 4, 1, 4, 5, -7, 0, 0}; {7, 0, -7, -1, 2, -2, -2, 5, 5, -2, 0, 0}; {1, -7, -1, 3, -3, -3, -6, 7, -5, -5, 0, 0}; {5, -6, -2, 7, 0, -3, 2, 6, 4, 1, 0, 0}; {-6, 2, 1, -7, 8, -2, 4, -2, 2, 0, 0, 0}; {1, 5, -4, 4, -3, -4, -1, -2, 6, 3, 0, 0}; {-6, 8, 3, -5, -5, 1, 8, 2, 8, -1, 0, 0}; {1, -6, 2, 2, -7, 2, 5, 6, 7, 0, 0, 0}; {5, 7, -1, -7, -5, 5, -1, 5, 2, -3, 0, 0}; {5, -5, 2, 2, -6, 3, -3, -4, -6, 0, 0, 0}; {-3, 6, -2, 7, -4, -6, -5, -2, 7, 7, 0, 0}; {7, 1, -7, 0, 7, 8, 6, 5, 8, 8, 0, 0}; {-5, 4, -5, -1, -7, -6, 8, 5, -6, -6, 0, 0}; {8, -2, 5, 4, -3, 4, -2, -3, -5, 1, 0, 0}; {8, 7, 3, 4, -4, 3, -6, 4, -5, -5, 0, 0}; {3, 7, -3, 3, 2, -2, -7, -2, -6, 1, 0, 0}; {5, -5, -7, -1, -7, -4, 1, -6, 6, 5, 0, 0}; {2, -5, 2, -7, 3, 5, 5, 2, 8, 8, 0, 0}; {5, -2, 0, -7, -3, -7, 4, -4, -6, -2, 0, 0}; {6, 3, -4, 4, 2, -7, -2, 7, -5, 1, 0, 0}; {0, 4, 7, -3, -6, 5, -1, 3, -2, 3, 0, 0}; {6, -2, -3, 7, 4, -5, 3, -5, 0, 0, 0, 0}; {2, 8, -4, 5, -2, -4, 1, 4, 4, 2, 0, 0}; {7, 0, -6, -5, 2, -5, 1, 3, 4, -2, 0, 0}; {-4, 6, -4, 3, -6, -5, 8, 6, -6, -6, 0, 0}; {-4, 2, -5, 0, -5, -5, 8, 5, -4, -5, 0, 0}; {0, -7, 8, 0, 3, 8, 1, -5, -1, -2, 0, 0}; {1, -7, -2, -7, 4, 2, -7, -2, -1, 0, 0, 0}; {-7, -2, 6, -2, -4, 2, 1, 6, 6, 3, 0, 0}; {0, -6, 1, 8, 1, 3, 4, 2, 7, 7, 0, 0}; {-4, 2, 1, 7, 6, -1, 6, -7, 4, 3, 0, 0}; {-5, 1, -5, 3, 2, -6, -7, 1, 3, 0, 0, 0}; {6, 0, -7, -6, 3, -5, 0, 2, 4, -2, 0, 0}; {4, -6, -5, 5, -2, -4, 2, 6, 3, 0, 0, 0}; {8, 2, -1, 8, -2, 5, 3, 6, -3, 1, 0, 0}; {6, 2, 4, -1, 3, -6, 4, 3, -7, -5, 0, 0}; {-2, -7, 1, -7, 1, 3, 3, 2, 6, 7, 0, 0}; {7, -3, 6, -4, 6, 8, 7, 3, -5, -6, 0, 0}; {8, -3, 6, -1, 8, 7, -5, -4, 4, 3, 0, 0}; {3, -3, 4, -6, 3, 5, 5, 3, 8, 8, 0, 0}; {1, -6, 2, -7, 3, 5, 4, 2, -7, -7, 0, 0}; {-7, 3, 3, -4, -2, 4, -3, -7, -3, -3, 0, 0}; {8, -4, 3, 7, 5, -6, 5, -4, -7, 5, 0, 0}; {-7, -1, 1, -6, 3, -1, 4, 7, 4, 1, 0, 0}; {3, 8, -5, 5, -2, -5, 1, 6, 3, 0, 0, 0}; {6, -1, 0, -6, -5, 2, -5, 7, -4, -2, 0, 0}; {-6, 2, -7, 3, -1, 2, 2, -1, -6, -6, 0, 0}; {8, -4, 4, -6, -3, -7, 3, -6, 7, 0, 0, 0}; {7, -1, -1, 7, 5, -4, 4, -3, 1, 0, 0, 0}; {0, -2, 6, 1, -2, 4, -6, 4, 8, 0, 0, 0}; {7, -1, 8, 3, 8, 7, -7, -4, 6, 6, 0, 0}; {-3, 4, 7, -1, 8, 3, 8, 7, 8, 7, 0, 0}; {4, -6, 3, -6, 4, 6, 6, 1, -5, -6, 0, 0}; {-5, 5, 4, -2, -1, 6, -2, -7, -2, -2, 0, 0}; {6, -3, 3, 3, -4, 3, -3, -4, -5, 1, 0, 0}; {2, 7, 6, -4, 6, -6, 0, -7, 6, 4, 0, 0}; {-3, 6, 5, -4, 1, 6, -1, -6, -2, -1, 0, 0}; {7, -6, 3, 8, -3, 7, 3, -6, 7, -1, 0, 0}; {-5, 1, 7, 0, -7, -6, -6, 3, 0, -4, 0, 0}; {0, 8, -1, -1, 8, -1, -5, -6, -7, 0, 0, 0}; {-1, 8, -1, 8, 1, 3, 4, 2, 6, 7, 0, 0}; {-1, -7, 3, -1, 5, -5, 2, 5, 4, 5, 0, 0}; {0, -7, 0, 8, 3, 4, 4, 2, 7, 8, 0, 0}; {7, -1, 3, -6, 2, -1, -4, -6, -5, -4, 0, 0}; {4, -5, 2, 8, -7, 5, 3, -7, 7, -1, 0, 0}; {4, -4, 3, 8, -7, 4, 4, -7, 7, -1, 0, 0}; {-1, 8, -7, 1, 4, 0, -7, 0, -3, -2, 0, 0}; {-2, 2, -5, 3, -5, -6, -3, -4, -7, 8, 0, 0}; {-3, 6, -2, 8, -4, -5, -5, -2, 6, 7, 0, 0}; {8, -4, 4, -6, -3, 8, 3, -6, 7, -1, 0, 0}; {5, 0, -6, -6, 2, -5, 1, 2, 5, -1, 0, 0}; {4, -4, -6, 3, -2, 3, -6, 2, 3, 3, 0, 0}; {8, -1, -6, -1, 2, 4, -4, 5, 4, 2, 0, 0}; {8, 2, -6, 2, -3, 0, 1, 0, 5, 6, 0, 0}; {5, -5, 2, -6, 5, 7, 7, 2, -2, -5, 0, 0}; {5, -5, 2, -6, 5, 7, 7, 2, -5, -6, 0, 0}; {2, -5, -5, 4, 2, -7, 1, -5, -1, -1, 0, 0}; {7, 0, -1, 7, -6, 4, -3, 2, -2, -1, 0, 0}; {6, -4, 3, 3, -6, 3, -2, -3, -6, 0, 0, 0}; {-3, 6, -2, 8, -4, -6, -5, -1, 7, 7, 0, 0}; {2, 1, -4, 5, 6, -4, 4, -1, 6, -2, 0, 0}; {-1, 8, 8, 1, 4, 0, -7, -1, -3, -2, 0, 0}; {-1, 8, 8, 1, 4, 0, -7, -1, -4, -3, 0, 0}; {1, 8, 1, 8, 6, 5, 4, 2, 8, -6, 0, 0}; {2, 3, -4, 0, 7, 3, 7, 3, -2, -5, 0, 0}; {8, 2, -5, 2, -3, -1, 1, 0, 5, 7, 0, 0}; {-4, 2, 2, -6, 4, -1, 5, 8, 4, 3, 0, 0}; {-4, 2, 2, -6, 4, -1, 5, 8, 4, 2, 0, 0}; {0, 7, -2, -1, 8, -1, -4, -6, 8, 0, 0, 0}; {-4, 5, 5, -2, 0, 5, -1, -6, -2, -3, 0, 0}; {2, -6, 3, -7, 4, 5, 4, 2, -7, -7, 0, 0}; {-6, 1, 6, 6, -3, 4, -1, -3, -5, 1, 0, 0}; {7, -3, 1, -6, 3, -1, 5, 5, 6, 4, 0, 0}; {-7, -1, 6, 5, -4, 4, -1, -3, -5, 1, 0, 0}; {6, -1, 6, -3, 6, 7, 6, 4, -7, -7, 0, 0}; {8, -2, 4, -4, 7, -7, 8, 3, -1, -4, 0, 0}; {-7, 1, 3, -5, 0, -5, 5, -3, -5, -3, 0, 0}; {8, -2, 4, -4, 7, -7, 8, 3, -3, -5, 0, 0}; {6, 1, -6, -6, 3, -4, 1, 2, 6, -1, 0, 0}; {3, -2, 8, -7, 0, -6, 0, 1, 4, -2, 0, 0}; {-6, 4, -3, 4, -2, 1, 2, 1, 6, 7, 0, 0}; {7, -2, 6, 1, 1, -6, -2, -3, -6, -4, 0, 0}; {0, 5, 6, -2, 7, 2, 7, -5, 5, 1, 0, 0}; {-7, 1, 1, -7, -4, 4, -4, 7, -2, 0, 0, 0}; {-4, 8, 1, 8, 5, 4, -3, -1, 8, -3, 0, 0}; {2, 7, 8, 0, 8, 3, 8, -5, 6, 2, 0, 0}; {-2, 7, 7, 0, 1, 7, -1, -6, -1, -1, 0, 0}; {7, -3, 4, -1, 3, -5, -6, 2, -1, -3, 0, 0}; {-7, -3, 6, -4, 6, -7, 8, 3, -5, -6, 0, 0}; {-3, 6, -6, 3, 8, 5, 0, -7, 8, -2, 0, 0}; {4, -1, 7, 1, 7, 6, 7, -4, 3, 5, 0, 0}; {-6, -1, -1, 7, -2, -7, -4, -5, -6, 6, 0, 0}; {4, -4, 2, 2, -5, 2, -4, -5, -6, 1, 0, 0}; {8, -2, 4, -3, 7, -7, 8, 3, -1, -4, 0, 0}; {5, 5, 1, 2, -6, 1, -6, 3, -5, -5, 0, 0}; {-1, 8, -5, 4, -7, 6, 1, -6, 8, -3, 0, 0}; {-4, 3, 4, -4, -7, -3, 5, 0, 1, 2, 0, 0}; {7, -4, 4, -5, -5, 1, 0, 6, 5, 3, 0, 0}; {-3, 8, -1, 8, -1, 2, 2, 1, 6, 7, 0, 0}; {7, -5, 5, -5, 5, -7, 7, 2, -6, -7, 0, 0}; {-4, -7, 3, -3, -4, 1, 7, 2, 6, -2, 0, 0}; {-1, 2, -6, 0, 1, -4, 6, -4, 8, 0, 0, 0}; {-2, -7, -6, 4, 8, -2, 7, 6, -5, -3, 0, 0}; {-3, 5, -3, -3, 5, 0, 3, 3, 0, 7, 7, 0, 0}; {-5, 3, -3, -3, 5, -1, 3, 4, 7, 0, 0, 0}; {1, 7, -6, 4, -2, -6, 0, 5, 2, 0, 0, 0}; {5, -4, -2, 5, 1, -5, 3, 7, 2, 0, 0, 0}; {5, 2, -7, 5, 0,

6, -5, 5, 8, 0, 0, 0}; {-6, 0, -7, 0, -6, -7, -4, -4, 7, 7, 0, 0}; {1, -6, 3, 2, -6, 1, 6, 6, 7, 0, 0, 0}; {-6, 2, -5, 5, -7, 8, -6, -4, 7, 7, 0, 0}; {5, -5, 2, 0, -6, 1, -3, -5, -6, 0, 0, 0}; {-2, 5, 1, -6, -4, 4, 7, 0, -1, -2, 0, 0}; {-3, 2, -5, 1, 6, 3, 0, 7, 5, -1, 0, 0}; {-4, 3, -6, -1, -3, -6, -7, 6, -5, -6, 0, 0}; {0, 7, -2, -2, 8, -1, -6, -6, -7, -1, 0, 0}; {8, -5, 7, -6, 6, -3, 3, 0, -6, 7, 0, 0}; {-1, 2, -7, -1, 2, -4, 7, -3, -7, 1, 0, 0}; {7, -1, 3, -5, 2, -1, -3, -6, -6, -4, 0, 0}; {-4, 5, -7, 0, 8, 3, -2, -7, -6, -5, 0, 0}; {5, 7, -3, 4, 4, -1, 8, -2, 8, 1, 0, 0}; {-2, 3, -7, 8, 1, 7, 1, -1, -4, 2, 0, 0}; {1, -6, 8, -2, 4, 7, 0, -5, -1, 1, 0, 0}; {5, -4, -6, 3, -3, 1, -7, 3, 3, 0, 0, 0}; {2, -6, 5, -6, -2, 0, -7, 3, 2, 1, 0, 0}; {0, -5, 1, -7, 1, 4, 4, 2, 7, 7, 0, 0}; {2, -5, 3, -7, 4, 5, 4, 3, 8, -7, 0, 0}; {-7, 5, -5, 5, -5, 7, -7, -2, 6, 7, 0, 0}; {-2, 3, 3, -7, 3, 8, -2, 7, 4, 3, 0, 0}; {-4, -5, 3, -3, -4, 2, -7, 3, 8, 0, 0, 0}; {6, 1, -7, 1, -5, -2, 0, -1, 5, 6, 0, 0}; {0, -7, 0, 8, 2, 3, 4, 2, 7, 8, 0, 0}; {-1, 7, -2, 2, -4, -3, -6, 7, -5, -5, 0, 0}; {-1, 5, -6, -7, 1, 7, 1, -1, -4, 2, 0, 0}; {-3, 1, -7, -3, 1, -4, 7, -5, 8, 0, 0, 0}; {5, -2, -3, 7, 4, -6, 3, -4, 0, 0, 0, 0}; {-3, 7, -2, 6, 0, 2, 3, 1, 6, 7, 0, 0}; {5, -4, -5, 3, -2, 3, -6, 3, 4, 3, 0, 0}; {0, -7, 2, -2, 4, 4, 6, -6, 3, 4, 0, 0}; {5, 3, -3, 8, 7, -3, 4, 0, 5, -2, 0, 0}; {0, 6, -1, 7, 6, -3, -3, 3, 4, 2, 0, 0}; {7, -1, 6, 6, -3, 5, 7, 8, -7, 1, 0, 0}; {-5, 3, -6, -5, 4, -4, 8, 8, 7, -2, 0, 0}; {7, -1, 7, 8, 1, -5, 6, 7, 7, -1, 0, 0}; {-7, -2, 3, -5, -2, -6, 5, -4, -7, 1, 0, 0}; {-7, 3, -5, 3, -1, 1, 1, 0, 6, 7, 0, 0}; {-7, -1, -1, 5, 1, 5, -4, 5, 4, 2, 0, 0}; {-1, 3, -5, 3, -1, 5, 4, 8, 7, 5, 0, 0}; {-6, 2, 2, -6, 8, -3, 5, -1, 1, 1, 0, 0}; {-7, 2, -6, 3, -3, 0, 1, 0, 5, 6, 0, 0}; {-2, 3, 8, 0, -6, 2, -3, -4, -5, -6, 0, 0}; {1, -6, 0, -7, 2, 4, 5, 2, 7, 7, 0, 0}; {7, 1, 0, 7, -3, 2, -4, 8, -3, -1, 0, 0}; {4, -5, 1, -6, 5, 8, 6, 2, -4, -5, 0, 0}; {-1, -7, -2, 5, -4, -4, -7, 7, -6, -5, 0, 0}; {-1, 7, 8, 1, -3, 8, -1, 5, 0, 0, 0, 0}; {-5, 5, -2, -2, 6, -1, 3, 4, 6, 0, 0, 0}; {5, -2, 3, -5, 3, -1, -5, 7, -7, -6, 0, 0}; {1, -5, -3, 7, -7, -1, -7, 6, -5, -3, 0, 0}; {1, -5, -3, 7, -7, -1, -7, 6, -5, -4, 0, 0}; {0, -7, 2, 2, -7, 1, 5, 6, 7, 1, 0, 0}; {0, -7, 2, 2, -7, 1, 5, 6, 7, 0, 0, 0}; {-6, -2, 4, -5, 7, -5, -7, -4, -7, 5, 0, 0}; {-5, 4, -4, 8, -5, 2, -7, -7, 7, 8, 0, 0}; {-3, 7, 1, -3, 4, -6, 0, 4, 4, 4, 0, 0}; {4, -4, 4, -6, 6, 7, 5, 3, -7, -7, 0, 0}; {4, -6, 1, 1, -6, 1, -3, -5, -6, 0, 0, 0}; {-4, 3, -6, -5, 5, -3, -7, 8, 8, -1, 0, 0}; {-1, -5, 4, -6, 4, -7, -1, 1, -4, -4, 0, 0}; {-2, 7, -1, -5, 3, 3, 4, -5, -1, 3, 0, 0}; {-4, -6, 4, -2, -4, 1, 7, 2, 6, -2, 0, 0}; {0, -3, 6, 0, -2, 4, -6, 4, 8, 0, 0, 0}; {8, -1, 5, 5, -4, 4, -2, -3, -6, 1, 0, 0}; {6, -5, -6, 0, -6, 4, -6, -5, 6, 4, 0, 0}; {-2, 3, -7, 8, -1, 6, 1, -2, -4, 2, 0, 0}; {-4, 4, -4, -4, 5, -3, -6, -7, 8, 0, 0, 0}; {4, -3, -4, 6, 3, -6, 3, -6, 0, 0, 0, 0}; {6, -5, 4, -2, 2, -7, -7, 2, 0, -3, 0, 0}; {-7, 3, -6, 0, 8, -7, 8, 6, -7, -7, 0, 0}; {-2, 6, -2, 6, 3, 3, 3, 2, 7, -7, 0, 0}; {2, -6, -1, 6, -1, -4, -6, 8, -7, -5, 0, 0}; {1, 8, 0, -4, 0, 8, 8, 1, -2, -3, 0, 0}; {-4, 7, -1, 6, -1, 1, 3, 1, 6, 7, 0, 0}; {0, -7, -7, 2, 2, 8, 0, -5, -1, -1, 0, 0}; {0, -7, -7, 2, 2, 8, 0, -5, 0, -1, 0, 0}; {0, -7, -7, 2, 2, 8, 0, -5, -1, -2, 0, 0}; {-5, 3, -3, 6, -5, -7, -6, -3, 8, 8, 0, 0}; {-5, 3, -3, 6, -5, -7, -6, -3, 7, 7, 0, 0}; {-1, 7, 1, 1, 8, 0, 5, 6, 7, 0, 0, 0}; {-6, 4, -3, 7, 5, -7, -4, 6, 8, 0, 0, 0}; {2, 7, -7, 1, -7, 4, -7, -6, 6, 2, 0, 0}; {-7, 4, -4, 5, -5, 7, -7, -2, 5, 6, 0, 0}; {1, 7, 6, -2, 7, 2, 7, -6, 5, 3, 0, 0}; {1, -4, 2, -6, 2, 5, 4, 2, 7, 7, 0, 0}; {0, 8, 6, -2, -2, -7, 1, 5, 1, 0, 0, 0}; {7, 1, -6, 1, -4, -1, 1, -1, 5, 6, 0, 0}; {-5, 3, 3, -6, -4, 6, -2, 5, 0, 0, 0, 0}; {-1, -7, 3, 3, -6, -6, 0, 5, 0, 1, 0, 0}; {5, -2, -3, 5, 6, -5, 3, -3, 1, -1, 0, 0}; {-3, 0, 8, -2, 0, -5, 5, -5, 8, 0, 0, 0};

{8, -1, 4, 4, -3, 4, -2, -3, -6, 1, 0, 0}; {-7, -2, 4, -3, 8, -7, -7, 3, -1, -4, 0, 0}; {1, 4, -5, 1, 2, -3, 8, -3, -7, 1, 0, 0}; {4, -3, 5, 5, -5, 3, 7, 7, 8, 1, 0, 0}; {4, -6, 4, -4, 6, 6, -7, -6, 6, 6, 0, 0}; {-3, 2, -7, 8, -2, 6, 1, -2, -4, 2, 0, 0}; {7, 4, 2, -5, 3, 8, 0, 6, 6, -4, 0, 0}; {5, -4, -3, 6, 0, -4, 2, 7, 2, 0, 0, 0}; {6, 1, -5, -5, 3, -4, 1, 3, 5, -1, 0, 0}; {6, 3, -5, 4, 2, 8, -3, 6, -6, 1, 0, 0}; {0, -7, -7, 2, 1, 8, 0, -6, -1, -1, 0, 0}; {-7, 5, 0, 1, -5, 4, -5, -3, 1, -3, 0, 0}; {-5, -3, 6, -1, 5, -5, -6, 3, 1, -3, 0, 0}; {-4, 4, -7, 0, 8, 3, -2, -7, -7, -5, 0, 0}; {2, -3, 6, -2, 8, -4, -1, -1, 3, 5, 0, 0}; {0, 6, -2, -2, 6, -1, -6, -6, 8, -1, 0, 0}; {3, -3, 7, 8, 0, -6, 0, 1, 4, -1, 0, 0}; {0, 4, 2, 6, 0, 1, 6, -3, -7, 6, 0, 0}; {-5, 1, -7, -1, -6, -6, 8, 5, -4, -5, 0, 0}; {-2, 3, -5, 2, -1, 4, 5, -6, 6, 3, 0, 0}; {0, 8, -4, 2, 8, 4, 0, -3, -4, -2, 0, 0}; {-4, 5, -2, -1, 5, -2, 4, 5, 5, -1, 0, 0}; {4, 2, -5, 3, 1, 7, -3, 6, -6, 1, 0, 0}; {5, -3, 4, -5, 5, 6, 6, 3, -7, -7, 0, 0}; {5, -5, -4, 3, -5, 7, -4, -7, -6, 4, 0, 0}; {-5, 2, -6, -1, -6, -6, 7, 5, -5, -5, 0, 0}; {-5, 5, 7, 1, 8, 3, -1, 8, -5, -2, 0, 0}; {1, 7, 2, -5, -4, 1, -4, 0, 4, 4, 0, 0}; {-6, -1, -7, -1, -4, 2, 3, -6, 6, 3, 0, 0}; {-6, 4, 1, 8, -1, 2, -3, -6, -4, -1, 0, 0}; {8, -1, 7, -1, 2, 0, -1, 1, -6, -7, 0, 0}; {5, -5, -2, 7, 0, -3, 3, 6, 3, 0, 0, 0}; {4, -5, 1, -6, 4, 7, 8, 1, -2, -5, 0, 0}; {-3, 6, 1, -5, 1, 3, 5, 7, 5, 5, 0, 0}; {0, 4, -4, 4, -4, -5, -1, -2, 6, 4, 0, 0}; {0, 4, -4, 4, -4, -5, -1, -2, 6, 3, 0, 0}; {-3, 2, 3, -4, 4, 0, 6, -7, 5, 1, 0, 0}; {-4, 3, 1, 8, 4, 7, -4, 5, 7, 4, 0, 0}; {1, -7, 2, -1, 5, 4, 7, -6, 5, 5, 0, 0}; {5, -4, 2, 6, 0, -1, -4, -7, -4, -4, 0, 0}; {7, 2, -5, 5, 2, 7, -5, 5, 8, 0, 0, 0}; {-1, 7, 1, -3, 3, 3, 6, -7, 5, 5, 0, 0}; {-1, -6, 5, 5, -1, 7, -2, -1, 3, -2, 0, 0}; {-2, 6, 5, -3, -3, 8, 0, 5, 0, 0, 0, 0}; {1, 6, 0, 7, 1, 5, 5, 0, -7, 8, 0, 0}; {-3, 3, -3, 4, 4, 7, 2, 3, 8, 6, 0, 0}; {-3, 3, -3, -7, -2, 6, 6, 0, -4, -3, 0, 0}; {7, -2, 4, -4, 6, 8, 8, 2, -2, -5, 0, 0}; {4, 8, 0, 6, 2, 7, 7, -4, 8, 4, 0, 0}; {1, -3, -3, 6, -1, 5, 0, 4, 5, -5, 0, 0}; {-2, 3, -4, 3, -4, -6, -3, -3, -7, 8, 0, 0}; {-7, -2, -1, 5, 0, 5, -4, 5, 3, 3, 0, 0}; {2, -5, 4, 3, -6, 2, 6, 7, 8, 1, 0, 0}; {-2, 7, 7, -1, 2, 6, -1, -5, -2, -1, 0, 0}; {-4, 4, -5, -6, 1, 8, -6, -7, -6, 2, 0, 0}; {5, -5, 5, -3, 7, 6, -7, -5, 6, 6, 0, 0}; {-6, 7, 0, 7, 4, -5, 0, 8, -3, 1, 0, 0}; {6, -2, 4, -2, -2, -7, -1, -4, -7, -5, 0, 0}; {-6, -1, 7, -2, -3, 3, 1, 7, 6, 2, 0, 0}; {1, -6, -7, 1, 3, -7, 1, -5, -1, -2, 0, 0}; {-1, 6, 6, -3, -2, 8, -1, 5, 0, 0, 0, 0}; {-2, 7, -1, -7, -3, -5, -4, -1, 7, 7, 0, 0}; {4, -7, 6, -2, 6, 6, -4, 7, 8, 2, 0, 0}; {-2, 7, -1, 8, -3, -5, -5, -1, 6, 7, 0, 0}; {3, -2, 7, 8, 2, -6, -1, 2, 4, -2, 0, 0}; {1, 8, -1, 7, 3, 5, 5, 0, -3, -6, 0, 0}; {-2, -6, 3, -6, 7, -3, 1, -7, -3, 2, 0, 0}; {-5, 5, -3, 6, -2, 1, 2, 1, 5, 6, 0, 0}; {6, -2, 8, 2, 8, 7, -7, -5, 6, 5, 0, 0}; {-3, 7, 3, -6, 2, 3, -3, -2, -5, -1, 0, 0}; {-5, 4, -2, -1, 6, -1, 3, 5, 6, 0, 0, 0}; {-5, 5, -3, 5, -2, 1, 2, 0, 6, 6, 0, 0}; {-3, 5, -3, 7, -4, -5, -5, -2, 7, 7, 0, 0}; {-3, 5, -3, 7, -4, -5, -5, -2, 6, 6, 0, 0}; {-3, 5, -3, 7, -4, -5, -5, -2, 5, 6, 0, 0}; {-1, 4, -6, 2, -5, -4, -4, 5, 1, -3, 0, 0}; {-5, 0, -7, 1, -7, 8, -4, -4, 7, 6, 0, 0}; {3, -5, 3, -5, -1, -4, -3, -1, -7, -7, 0, 0}; {2, -6, 3, -3, -1, 7, -5, -5, -7, -6, 0, 0}; {6, 0, -6, -5, 2, -5, 1, 2, 5, -1, 0, 0}; {6, 0, -6, -5, 2, -5, 1, 2, 4, -2, 0, 0}; {6, 1, 4, -1, 2, -7, 4, 3, 8, -5, 0, 0}; {6, 1, 4, -1, 2, -7, 4, 3, 8, -6, 0, 0}; {-4, 2, 8, 7, -1, 5, 0, -2, -4, 1, 0, 0}; {-7, -2, 1, -6, 2, -1, 4, 7, 5, 2, 0, 0}; {0, 4, -4, 4, -3, -5, -1, -2, 5, 4, 0, 0}; {5, -5, 2, -5, 6, 8, 6, 3, -3, -4, 0, 0}; {1, 6, -5, -5, 1, -7, 2, 1, -3, 2, 0, 0}; {0, 8, -2, 7, 7, -1, 2, 0, -4, -3, 0, 0}; {-5, 3, -5, 5, -7, -7, -5, -4, 7, 6, 0, 0}; {-6, 3, -3, -3, 5, -2, 3, 4, 7, 0, 0, 0}; {-6, 3, -3, -3, 5, -2, 3, 4, 6, 0, 0, 0}; {2, 6, 2, 8, 1, 5, 6, 0, -7, 8, 0, 0}; {5, 0, -5, -4, -6, 0, -5, 1, 4, -6, 0, 0}; {6, 1, -6, 4, 2, 7, -5, 5, 8, 0, 0, 0}; {0, 7, -2, 5, 7, 4, 3, 3, -4, -6, 0, 0}; {1, -4, 7, -3, 5, 6, -2, 0, -4, 0, 0, 0}; {7, 0, 8, 0, 2, -6, -1, -3, -6, -4, 0, 0}; {2, -6, 8, 0, 3, -7, 0, -5, 0, 1, 0, 0}; {-2, 4, -7, 8, 0, 7, 1, -1, -4, 2, 0, 0}; {-4, 3, 7, -3, 5, 2, -1, -4, -4, -3, 0, 0}; {-3, 6, 3, -5, -5, 0, 7, 0, 3, 0, 0, 0}; {6, 4, -4, 4, 2, 8, -2, 7, -5, 1, 0, 0}; {2, 6, -2, 5, -7, 5, 2, 8, 6, -1, 0, 0}; {-2, 8, -1, 8, -3, -5, -5, -1, 7, 7, 0, 0}; {1, -5, 3, -7, 2, 5, 5, 3, 7, 8, 0, 0}; {5, -7, 2, -4, 1, -7, 8, 2, -1, -4, 0, 0}; {-7, 2, 3, -3, -3, 4, -3, 8, -3, -2, 0, 0}; {7, 1, 8, 0, 6, 8, 7, 5, 8, 8, 0, 0}; {3, -4, 5, -3, -1, 8, -4, -5, -7, -6, 0, 0}; {-6, -1, 8, -2, -4, 3, 0, 7, 7, 2, 0, 0}; {6, 8, -1, 5, 5, 0, -7, -2, -7, 1, 0, 0}; {0, 3, -6, 0, 2, -4, 6, -4, 8, 0, 0, 0}; {7, 0, 7, -2, 6, 8, 8, 5, 8, -7, 0, 0}; {-4, 7, -2, 7, -1, 2, 2, 1, 6, 6, 0, 0}; {0, -5, 2, -3, 7, -5, -1, 8, -6, 1, 0, 0}; {-1, 5, -2, 8, 1, 1, 7, 8, 1, 2, 0, 0}; {7, -3, -3, 4, -1, 3, -5, 4, 4, 3, 0, 0}; {7, -3, -3, 4, -1, 3, -5, 4, 4, 2, 0, 0}; {4, -5, -1, 5, -3, 7, 1, -4, -4, -4, 0, 0}; {8, 1, -5, -4, 3, -4, 2, 3, 5, -1, 0, 0}; {3, -5, -4, 4, 7, 2, -6, 0, -2, 1, 0, 0}; {-5, 1, -6, 6, -5, 5, 5, -1, -4, -5, 0, 0}; {-1, 1, 6, -4, -6, 5, -2, 2, -3, 3, 0, 0}; {5, -1, 6, -4, 5, 7, 7, 4, 8, 8, 0, 0}; {7, 1, -6, -6, 4, -4, 1, 2, 6, -1, 0, 0}; {-5, 7, -1, 6, -1, 1, 2, 1, 5, 7, 0, 0}; {-4, 1, 8, 0, -2, 4, 3, 7, 6, 4, 0, 0}; {-2, 8, 0, 0, 8, 0, 4, 5, 7, 0, 0, 0}; {7, -1, -7, 2, 7, 7, 8, -5, 7, 6, 0, 0}; {4, -7, 1, 6, -5, 7, 3, -7, 7, 0, 0, 0}; {-2, 7, 6, -2, 1, 7, -2, -6, -1, 0, 0, 0}; {7, -5, 2, -7, -4, 8, 4, -6, 7, 0, 0, 0}; {-3, 3, -4, 5, 5, -4, -4, 2, 3, 0, 0, 0}; {-6, 4, -4, 5, -5, -7, -7, -2, 3, 5, 0, 0}; {5, -3, 5, -4, 0, -2, -2, 0, -6, -7, 0, 0}; {-5, -2, 4, -3, -1, -7, 2, -6, 6, -1, 0, 0}; {4, 5, -4, 5, -1, 2, 3, 1, 6, 7, 0, 0}; {-7, -1, 0, 7, 2, -4, 4, 7, 2, 1, 0, 0}; {-2, 6, 1, 6, -5, -3, 6, 2, 0, 1, 0, 0}; {8, 5, -2, 5, 4, -7, -1, 8, -4, 2, 0, 0}; {-5, 2, -2, 7, -7, -2, -6, -3, 3, 3, 0, 0}; {-7, 3, -7, 0, 8, -7, 7, 5, -7, -7, 0, 0}; {4, -1, 8, 2, 1, 6, -7, 4, 7, -1, 0, 0}; {-4, 3, 4, -6, -4, 6, -2, 7, 1, 1, 0, 0}; {7, -3, 0, -7, 1, -1, 5, 3, 6, 1, 0, 0}; {6, 0, -6, -6, 3, -5, 1, 2, 6, -1, 0, 0}; {6, 0, -6, -6, 3, -5, 1, 2, 5, -1, 0, 0}; {-3, 5, -1, -1, 6, -2, 4, 5, 6, -1, 0, 0}; {3, 7, -3, -4, 3, -7, 3, 0, -3, 2, 0, 0}; {-7, -1, 1, -6, 2, 0, 6, 4, 6, 1, 0, 0}; {-4, 4, -5, 2, -5, -6, 7, 6, -7, -6, 0, 0}; {6, 2, -6, 5, 1, 6, -5, 5, 8, 0, 0, 0}; {3, -5, 3, -6, 6, 7, 5, 3, -7, -7, 0, 0}; {-6, 3, -4, 5, -7, -7, -7, -4, 7, 7, 0, 0}; {-3, 2, 8, 7, -1, 6, 0, -2, -4, 2, 0, 0}; {-3, 6, 4, -5, 1, 5, -1, -6, -2, 0, 0, 0}; {7, 0, -7, 3, 8, 7, -7, -4, 5, 5, 0, 0}; {3, -2, 8, -6, 0, -6, 0, 1, 5, -1, 0, 0}; {-1, 8, 1, 1, 8, 0, 5, 5, 7, 0, 0, 0}; {-7, -6, 0, 6, 7, 1, -6, -1, -6, 2, 0, 0}; {2, -7, 0, -1, -7, 0, -5, -5, -7, -1, 0, 0}; {-5, -6, 5, 6, -2, 4, -5, 5, -3, -4, 0, 0}; {2, 6, 4, 7, 0, 2, 8, -1, -6, 6, 0, 0}; {-3, 6, -1, 0, 7, -2, 4, 4, 6, 0, 0, 0}; {5, -3, 7, 2, 7, 6, 8, -5, 6, 6, 0, 0}; {0, 7, -7, 3, -3, -6, 0, 5, 1, -1, 0, 0}; {-6, 7, 0, 7, 5, -5, 0, 8, -3, 2, 0, 0}; {-3, 5, -2, 7, -4, -6, -5, -3, 8, 7, 0, 0}; {-1, 6, 1, -6, -5, 0, -4, -1, 4, 4, 0, 0}; {-3, 7, 7, 0, 3, -1, 8, -1, -4, -2, 0, 0}; {7, 1, -6, -6, 4, -4, 1, 3, 6, -1, 0, 0}; {-2, 2, -5, 1, -2, 3, 4, -6, 7, 3, 0, 0}; {8, 0, -1, 7, 7, -4, 4, -2, 1, 0, 0, 0}; {-4, 2, 6, 0, -6, 8, -2, 2, 2, 2, 0, 0}; {-2, 8, -7, 2, 8, -3, 8, 6, -6, -4, 0, 0}; {4, 7, -3, 3, 4, -1, -7, -2, -6, 2, 0, 0}; {2, -6, 2, -7, 4, 5, 5, 3, 8, -7, 0, 0}; {5, -6, 1, -5, 5, 7, 7, 1, -1, -4, 0, 0}; {8, -2, 7, -1, 8, 8, -5, -5, 8, 7, 0, 0}; {-1, 8, -2, -2, 8, 0, -6, -6, -7, 1, 0, 0}; {-2, -7, 0, 7, 0, 3, 3, 2, 6, 7, 0, 0}; {-4, 4, -4, 1, 6, 2, 1, 2, -4, -5, 0, 0}; {-4, 4, 2, -5, 8, -1, 5, -3, 1, 0, 0, 0}; {-4, 3, 1, 8, 4, 7, -4, 4, 7, 3, 0, 0}; {-2, 2, 8, -1, 0, -5, 6, -4, 8, 0, 0, 0}; {6, -1, 7, -2, 2, -1, -1, 1, 6, 7, 0, 0}; {-3, 7, -4, 5, 0, -7, 8, -3, -1, 3, 0, 0}; {-4, -5, 6, 7, -1, 6, -4, 6, -2, -4, 0, 0}; {3, -6, 0, 0, -6, 1, -4, -5, -7, 0, 0, 0}; {-7, -1, 5, 5, -3, 4, -2, -3, -5, 1, 0, 0}; {-7, -1, 5, 5, -3, 4, -2, -3, -6, 1, 0, 0}; {-7, 3, -4, -4, 5, -3, 2, 4, 6, -1, 0, 0}; {5, 0, -7, -7, 3, -5, 1, 2, 6, -1, 0, 0}; {-4, 4, 3, -5, -7, -2, 5, -3, 2, 1, 0, 0}; {4, -1, 8, 2, 1, 6, -6, 4, 7, 0, 0, 0}; {4, 2, 8, 4, 0, 0, -7, -4, 5, -4, 0, 0}; {4, -3, -1, 8, -4, -7, 4, -5, -7, -4, 0, 0}; {6, -2, 6, 0, 1, -6, -2, -4, -6, -4, 0, 0}; {-3, 2, 8, 7, 0, 6, 1, -2, -4, 2, 0, 0}; {6, -4, -1, 8, 1, -2, 3, 6, 4, 1, 0, 0}; {2, 7, 6, -4, 5, -7, 0, -7, 6, 3, 0, 0}; {1, -6, 3, 2, -6, 2, 6, 6, 8, 1, 0, 0}; {3, -4, 4, 3, -5, 2, 7, 7, 8, 0, 0, 0}; {4, -3, 4, -5, 4, 6, 6, 3, -7, -7, 0, 0}; {-3, -1, 7, -2, 0, -6, 3, -6, 6, -1, 0, 0}; {0, 5, -5, -6, 1, 8, 2, 0, -3, 2, 0, 0}; {0, -6, 3, -3, 4, 4, 5, -5, 0, 3, 0, 0}; {-1, 6, -3, -3, 7, -2, -6, -7, -7, -1, 0, 0}; {1, -5, 3, 3, -6, 2, 6, 6, 8, 0, 0, 0}; {8, 2, 6, -1, 5, 2, -2, 7, 7, -3, 0, 0}; {8, 2, 6, -1, 5, 2, -2, 7, 7, -4, 0, 0}; {8, 6, -1, -5, -7, -1, 5, 1, 5, -2, 0, 0}; {6, 7, -1, 4, 6, -1, 8, -2, -7, 1, 0, 0}; {1, -7, -1, -1, 8, 0, -5, -6, -7, 0, 0, 0}; {5, -3, 8, 1, -7, -2, 3, 8, 7, 6, 0, 0}; {-4, -7, 7, -2, 7, -5, 2, -7, 7, -3, 0, 0}; {3, -5, 2, -2, -5, -6, 2, -7, -4, -2, 0, 0}; {0, 8, 3, -4, -3, 5, 8, 0, 0, -1, 0, 0}; {-4, 7, -2, 7, -3, -7, -6, -1, 7, 8, 0, 0}; {-4, 7, -2, 7, -3, -7, -6, -1, 6, 7, 0, 0}; {4, -4, 2, 5, -1, -1, -4, 8, -4, -5, 0, 0}; {1, 6, -4, 4, -3, -3, -4, 6, 2, -3, 0, 0}; {0, 7, -2, -2, 7, -1, -5, -6, -7, 0, 0, 0}; {0, 7, -2, -2, 7, -1, -5, -6, -7, -1, 0, 0}; {-1, 7, -4, 2, -4, -4, -6, 7, -6, -6, 0, 0}; {6, -4, 2, -3, 7, 5, -5, 0, 1, 0, 0, 0}; {-1, 2, 6, -2, -6, -1, -4, -4, -5, 6, 0, 0}; {-3, 6, 7, 0, 0, 6, -1, -6, -1, -1, 0, 0}; {-3, 6, 7, 0, 0, 6, -1, -6, -2, -1, 0, 0}; {-6, 0, 6, -1, 8, -6, -6, 2, -1, -5, 0, 0}; {8, 0, -1, 7, 7, -4, 3, -2, 1, 1, 0, 0}; {3, -5, -1, 6, -1, -3, -5, -7, -6, -4, 0, 0}; {3, -5, -1, 6, -1, -3, -5, -7, -6, -5, 0, 0}; {1, -7, 2, -6, -2, -4, -4, -2, -7, 8, 0, 0}; {-4, 1, 3, -4, 4, 0, 5, -7, 5, 2, 0, 0}; {4, -7, -3, 4, 5, 0, -6, 0, -4, 2, 0, 0}; {8, -1, 6, -3, 7, 8, 7, 4, -7, -7, 0, 0}; {5, -3, 5, -6, 6, 7, 4, 3, -6, -5, 0, 0}; {2, -6, 1, -7, 5, 5, 5, 3, 8, -7, 0, 0}; {-4, 4, 6, -1, -3, 5, -3, -7, -2, 0, 0, 0}; {5, -4, 2, -5, 5, 8, 7, 2, -3, -5, 0, 0}; {3, -3, 4, -6, 4, 6, 5, 3, 8, 8, 0, 0}; {1, -6, 5, -1, 5, -4, 2, 5, 5, 5, 0, 0}; {3, -5, 4, 3, -5, 3, 7, 7, -7, 1, 0, 0}; {3, -4, -4, 5, 3, -7, 2, -5, 0, 0, 0, 0}; {-1, 4, -6, -7, 0, 8, 1, 0, -4, 1, 0, 0}; {4, 6, -3, 2, 4, -1, -7, -2, -6, 2, 0, 0}; {-1, -1, 6, -6, -5, 4, -4, 1, -5, 2, 0, 0}; {-2, 7, 3, -5, 1, 3, -4, -3, -6, -1, 0, 0}; {-7, 1, 8, -2, -7, -7, 7, 5, -6, -6, 0, 0}; {4, -7, 1, 7, 0, -2, 1, 0, 8, 6, 0, 0}; {2, -4, 4, -6, 3, 5, 5, 3, 7, 8, 0, 0}; {2, -5, 1, -7, 3, 5, 5, 3, 7, 8, 0, 0}; {-2, 4, 7, -3, 7, 3, -7, 8, -7, 4, 0, 0}; {-6, 1, 6, 6, -2, 5, -1, -2, -5, 2, 0, 0}; {1, -3, 7, 1, -2, 3, 8, 3, 6, -1, 0, 0}; {7, 1, -7, 3, -7, 8, 8, -3, 3, 5, 0, 0}; {-1, 5, 0, -6, -1, 6, 7, 1, -2, -3, 0, 0}; {3, 7, -3, -3, 3, -2, -7, -2, -6, 1, 0, 0}; {-1, 8, 1, 1, 8, 1, 5, 6, 7, 1, 0, 0}; {8, 1, -7, -2, 7, -7, 8, 5, -7, -7, 0, 0}; {-2, 4, 7, 1, -5, 8, -1, 4, 1, -1, 0, 0}; {6, -7, 1, -7, -5, 6, 0, 8, 4, -2, 0, 0}; {-7, 2, 6, -2, 7, -6, 8, 4, -7, -7, 0, 0}; {-7, -1, 6, 5, -2, 4, -2, -3, -5, 0, 0, 0}; {8, -3, 6, -4, -5, 1, 0, 7, 5, 4, 0, 0}; {2, -6, 3, -5, -1, -3, -3, -1, -7, 8, 0, 0}; {4, -6, 1, 1, -7, 1, -4, -5, -6, 0, 0, 0}; {-5, 4, 3, -6, 0, 4, -2, -7, -2, 0, 0, 0}; {0, 1, -3, -7, -4, 2, -6, -7, -1, -6, 0, 0}; {5, -2, 6, 5, -4, 3, 7, 8, 8, 1, 0, 0}; {-6, -1, 5, 5, -2, 4, 0, -3, -5, 1, 0, 0}; {-1, 6, -3, 6, 1, 4, 5, 0, -3, -5, 0, 0}; {1, -6, 3, 8, 3, 4, 5, 2, 8, -7, 0, 0}; {-7, 0, -5, 1, 2, 6, -4, 4, 4, 1, 0, 0}; {0, -5, 5, 6, -1, 8, -2, 0, 3, -2, 0, 0}; {2, 6, 8, 0, 8, 3, 8, -5, 7, 3, 0, 0}; {2, 6, 8, 0, 8, 3, 8, -5, 6, 2, 0, 0};

{-4, 4, 4, -4, -4, 7, -1, 4, 0, -1, 0, 0}; {-5, 4, -3, 7, 2, 1, 1, 8, -4, 1, 0, 0}; {3, -5, -5, 4, 2, -6, 1, -6, -1, -1, 0, 0}; {6, 1, 6, -2, -1, -6, 0, -3, -7, -5, 0, 0}; {8, 1, -6, 3, -7, 8, -7, -4, 7, 7, 0, 0}; {6, -3, 6, 5, -4, 5, 8, 8, -7, 2, 0, 0}; {3, -5, 4, 3, -6, 3, 7, 7, 8, 1, 0, 0}; {7, -1, 7, 8, 2, -6, 7, 7, 7, -2, 0, 0}; {-5, 5, -2, 8, 6, -6, -3, 6, -7, 1, 0, 0}; {2, -5, 2, 8, 5, 6, 5, 2, 8, 8, 0, 0}; {3, -7, 0, 0, 8, 0, -4, -5, -6, 0, 0, 0}; {-7, 1, -6, -6, 3, -5, -7, 8, 7, -1, 0, 0}; {-5, 0, 7, 6, -1, 5, 0, -3, -4, 1, 0, 0}; {-4, 6, 4, -5, 0, 5, -3, -7, -3, 0, 0, 0}; {-3, 5, 1, -7, -6, -1, -6, -2, 4, 3, 0, 0}; {7, 2, -7, 0, 7, 8, 6, 5, -7, 8, 0, 0}; {2, 7, 6, -4, -7, 2, 8, -5, 5, 3, 0, 0}; {6, -5, 4, -5, -6, 0, 0, 7, 4, 3, 0, 0}; {3, -5, 3, -6, 7, 7, 5, 3, -7, -7, 0, 0}; {-4, 0, 8, 1, -6, -7, -3, -3, 4, 3, 0, 0}; {0, 7, -1, -7, -3, -4, -3, -2, 8, 7, 0, 0}; {-3, 0, 7, -2, 0, -6, 5, -5, 7, 0, 0, 0}; {2, -6, 2, -3, -2, 7, -4, -5, -7, -5, 0, 0}; {-1, 5, 4, -4, 6, 1, 6, -7, 5, 4, 0, 0}; {6, -2, 7, -2, 1, -2, -1, 1, 6, 6, 0, 0}; {2, -3, 3, -5, 2, 5, 4, 3, 7, 8, 0, 0}; {-5, 4, -6, 0, -6, -6, 8, 6, -7, -6, 0, 0}; {-6, 2, 8, -1, -7, -7, 8, 6, -7, -6, 0, 0}; {0, 5, 5, -5, 6, 0, 7, -7, 4, 3, 0, 0}; {8, -1, 5, 5, -4, 4, -1, -3, -5, 1, 0, 0}; {-5, 3, 3, -4, 8, -3, 5, -1, 1, 1, 0, 0}; {-1, 8, 8, 1, 1, 7, 0, -5, -1, -2, 0, 0}; {2, -7, 1, -6, -3, -3, -2, -2, -7, 7, 0, 0}; {0, -4, 7, 0, -2, 3, -7, 2, 6, -1, 0, 0}; {1, 8, -7, 1, -4, 0, 8, 3, 0, 1, 0, 0}; {6, 0, 7, -3, 6, 7, 6, 4, 8, -7, 0, 0}; {-4, 1, 7, 7, -1, 5, 0, -2, -5, 1, 0, 0}; {6, 0, 7, -4, 6, 8, 6, 4, 8, -7, 0, 0}; {3, 8, 1, 8, 2, 6, 5, 0, -5, -6, 0, 0}; {-3, 4, -4, -4, 6, -2, -6, -7, -7, 0, 0, 0}; {-7, 3, -4, 5, -4, 0, 2, 0, 4, 6, 0, 0}; {6, 4, -4, 4, 2, 8, -1, 7, -5, 2, 0, 0}; {3, -3, 4, -2, 0, 8, -3, -4, -7, -5, 0, 0}; {-7, 3, -6, 4, -6, 8, -7, -3, 5, 6, 0, 0}; {-3, 6, -1, -4, 2, 2, 5, -7, 3, 4, 0, 0}; {8, -2, 5, 4, -4, 3, -1, -4, -5, 1, 0, 0}; {4, -6, -4, 6, -1, -4, 2, 6, 3, 0, 0, 0}; {4, 7, 0, 5, -5, 6, 2, -7, 7, -1, 0, 0}; {2, -6, -6, 4, 1, -7, 1, -6, -1, 0, 0, 0}; {7, -1, 7, -4, 8, 8, 6, 4, -6, -6, 0, 0}; {7, -7, -4, 4, -1, 4, 0, -2, -3, 6, 0, 0}; {-7, 1, 1, 8, -6, 5, -3, 3, -1, 0, 0, 0}; {6, -4, 3, 3, -6, 3, -3, -4, -6, 1, 0, 0}; {-6, 3, -5, 4, -7, 8, -6, -4, 7, 7, 0, 0}; {2, -5, -6, 3, 4, -7, 2, -4, 0, -2, 0, 0}; {-4, -1, 7, -4, 0, -5, 6, -5, 8, 0, 0, 0}; {3, 8, 6, -4, -7, 2, -7, -5, 5, 4, 0, 0}; {2, 5, -4, 1, 4, -2, 8, -2, -6, 1, 0, 0}; {-7, -1, 5, 5, -4, 4, -1, -2, -5, 1, 0, 0}; {-3, 4, -5, -5, 5, -3, -7, -7, 8, -1, 0, 0}; {-3, 4, -5, -5, 5, -3, -7, -7, 7, -2, 0, 0}; {-7, 3, 6, 0, 6, 3, -1, 7, 8, -4, 0, 0}; {6, 3, -4, 4, 2, 8, -2, 7, -5, 1, 0, 0}; {6, -2, 5, -4, 7, 8, 6, 4, -7, -7, 0, 0}; {-7, 3, -5, 3, -3, 0, 2, 0, 5, 6, 0, 0}; {4, -4, -3, 5, 4, -6, 1, -4, 0, 0, 0, 0}; {8, 3, -5, 4, -4, -1, 1, 0, 4, 6, 0, 0}; {7, -4, 0, -7, 1, -2, 3, 6, 4, 1, 0, 0}; {4, -5, 2, 2, -6, 2, -3, -4, -6, 1, 0, 0}; {4, -5, 2, 2, -6, 2, -3, -4, -6, 0, 0, 0}; {-3, 4, -4, -4, 6, -2, -7, -7, -7, 0, 0, 0}; {1, -7, 2, -4, 6, 4, 4, -6, -2, 2, 0, 0}; {4, 0, 7, 1, -7, -3, -1, -2, 4, 5, 0, 0}; {8, 1, -7, 4, -7, 7, -7, -4, 6, 6, 0, 0}; {-2, 3, -5, 3, -4, -5, -3, -3, -7, 8, 0, 0}; {-5, 7, -2, 6, -2, 1, 2, 1, 6, 6, 0, 0}; {7, 0, 7, 8, 2, -5, 6, 7, 7, -1, 0, 0}; {7,-4, 7, -2, -2, -7, -6, 4, 1, -3, 0, 0}; {6, 3, -5, 6, 2, 7, -5, 5, 8, 0, 0, 0}; {2, -7, 1, -7, 4, 6, 5, 3, 8, 8, 0, 0}; {3, -6, 1, 1, -7, 1, -4, -5, -7, 0, 0, 0}; {8, 4, -5, 4, -5, 7, 8, -2, 5, 6, 0, 0}; {-5, 8, 1, 8, 5, -4, 1, -7, -3, 2, 0, 0}; {-4, 3, -6, 4, 4, -4, 1, -1, -5, -3, 0, 0}; {7,-2, 7, 3, 8, 6, -7, -5, 7, 6, 0, 0}; {8, -1, 8, 3, 8, 7, -7, -4, 7, 7, 0, 0}; {3, -4, 2, -7, 0, -2, -5, -7, -6, -5, 0, 0}; {-6, 3, -4, 5, -6, -7, -7, -4, 7, 7, 0, 0}; {-1, 6, 3, -7, -4, 0, 8, 1, 3, 2, 0, 0}; {0, 8, 8, 1, 1, 8, 0, -6, -1, -1, 0, 0}; {4, -6, 1, 0, -6, 1, -3, -5, -6, 0, 0, 0}; {-5, 4, -2, -2, 5, -2, 3, 4, 6, -1, 0, 0}; {2, -5, 4, -5, -1, -3, -4, 1, 4, 6, 0, 0}; {-3, -4, 0, -4, 6, 1, 4, -1, 5, 8, 0, 0}; {5, -3, 5, -5, -7, 7, 6, 3, -7, -6, 0, 0}; {0, -1, 3, 7, 4, -2, 6, 7, 1, 6, 0, 0}; {3, 5, -4, 1, 4, -2, 8, -2, -6, 1, 0, 0}; {7, 1, -6, 2, -5, -1, 2, 1, 4, 6, 0, 0}; {4, -5, 2, 2, -6, 2, -3, -5, -6, 1, 0, 0}; {3, -6, 6, -2, -3, 5, 7, -1, 2, 0, 0, 0}; {-6, 4, -3, -3, 6, -3, 2, 3, 6, 0, 0, 0}; {4, -4, 3, -6, 7, 7, 6, 3, -7, -7, 0, 0}; {6, 1, 7, -3, 6, 8, 6, 4, 8, -7, 0, 0}; {6, 1, 7, -3, 6, 8, 6, 4, 8, 8, 0, 0}; {0, -7, 0, -7, -2, -4, -3, -1, 7, 7, 0, 0}; {7, -3, -2, 8, 1, -3, 3, 7, 3, 0, 0, 0}; {-5, 6, 0, 8, 5, -6, -2, 7, -6, 1, 0, 0}; {7, -2, 5, -2, 2, 0, -1, 1, -7, 8, 0, 0}; {-1, 8, 0, 7, 1, 3, 4, 2, 7, 8, 0, 0}; {-3, -6, 8, -1, 7, -5, 2, -7, 7, -3, 0, 0}; {-5, 2, 7, 7, -1, 5, -1, -3, -5, 1, 0, 0}; {0, 7, 8, -1, -5, 1, 7, 1, 0, 2, 0, 0}; {-6, 4, -6, 0, -7, -7, 8, 6, -7, -7, 0, 0}; {7, -1, -4, 5, -5, 3, 4, -1, -3, -2, 0, 0}; {-4, 1, 7, 0, -7, -5, -6, 3, 0, -4, 0, 0}; {-4, 2, 1, 8, 3, 7, -3, 6, 5, 4, 0, 0}; {0, 7, -2, -2, 7, -1, -6, -6, 8, -1, 0, 0}; {0, -7, 2, 1, -7, 1, 5, 5, 7, 0, 0, 0}; {8, 0, 8, 1, -3, 1, 1, -2, 6, 6, 0, 0}; {8, 1, -7, 4, -7, 8, -7, -3, 5, 6, 0, 0}; {-5, 2, -6, -6, 4, -4, -7, -7, 7, -2, 0, 0}; {7, -2, 8, 3, 7, 6, 8, -4, 7, 7, 0, 0}; {1, 6, 7, -1, 7, 3, 8, -6, 6, 2, 0, 0}; {-6, 0, 6, 6, -2, 5, -1, -3, -5, 1, 0, 0}; {-2, 6, 2, -4, 4, -6, 0, 5, 5, 5, 0, 0}; {4, -4, 4, -5, 7, 8, 5, 4, -7, -7, 0, 0}; {2, -7, 3, -5, -1, -4, -4, -1, -7, -7, 0, 0}; {-6, 1, -7, -6, 3, -5, 8, -7, 7, -1, 0, 0}; {7, -2, -6, -1, 2, 4, -4, 4, 4, 2, 0, 0}; f 2, -4, -2, 7, -4, 8, 2, -6, -6, -3, 0, 0}; {-6, 3, -5, 4, -5, -7, -7, -2, 3, 5, 0, 0}; {3, 7, -1, 3, 2, 7, 3, -6, 8, 5, 0, 0}; {-3, 2, -7, 1, -2, 4, 3, 7, 6, 4, 0, 0}; {-6, 1, -4, 6, -6, -3, -5, -5, 3, 5, 0, 0}; {-1, 7, -1, 7, 4, 4, 3, 2, 8, -6, 0, 0}; {1, -6, -6, 3, 2, 8, 1, -5, 0, 0, 0, 0}; {0, 4, -5, -6, 2, 8, 2, -1, -3, 2, 0, 0}; {-3,-3, 7, 8, 0, 5, -2, 7, -2, -4, 0, 0}; {-6, -1, 4, -3, -2, 5, 2, 8, 5, 0, 0, 0}; f-1, 3, -5, 2, -1, 5, 3, 8, 7, 5, 0, 0}; {-4, 4, 4, -4, -2, 6, -2, -7, -1, 0, 0, 0}; {2, -6, 1, -7, 3, 5, 5, 3, 7, 8, 0, 0}; {8, 1, 3, -5, 0, -5, 4, -4, -5, -2, 0, 0}; {-2, 4, 8, 2, -5, -7, -1, 2, 3, 2, 0, 0}; {-3, 5, 4, -4, -6, -1, 7, 0, 2, 1, 0, 0}; {-5, 5, -2, 7, 6, -6, -3, 7, -7, 1, 0, 0}; {-5, 0, 7, 0, 8, -5, -5, 4, 1, -2, 0, 0}; {8, 1, -5, -5, 4, -3, 2, 4, 6, -1, 0, 0}; {5, -3, -2, 6, 5, -6, 2, -3, 0, 0, 0, 0}; {6, -3, 2, -3, 7, 5, -4, -1, 1, 1, 0, 0}; {-5, 3, -5, -1, -6, -5, 7, 5, -5, -5, 0, 0}; {3, -1, -5, 3, 7, 1, 5, 5, 5, -5, 0, 0}; {-5, 5, -2, -1, 5, -2, 4, 4, 5, -1, 0, 0}; {-3, 7, -1, 6, -1, 2, 2, 1, 6, 7, 0, 0}; {-6, 4, -6, -1, -7, -6, 8, 5, -7, -6, 0, 0}; {-6, 4, -6, -1, -7, -6, 8, 5, -7, -7, 0, 0}; {0, 8, 3, -7, -3, -1, 8, 2, 2, 0, 0, 0}; {-4, 3, -6, -5, 5, -3, -7, -7, 8, -1, 0, 0}; {0, -6, 1, -7, 1, 4, 4, 2, 6, 7, 0, 0}; {1, -7, -2, 5, -2, -4, -6, 8, -6, -5, 0, 0}; {2, -6, -1, -6, -7, -4, 5, 1, -4, -5, 0, 0}; {4, -6, 2, 2, -6, 2, -3, -5, -6, 1, 0, 0}; {4, -5, 4, 4, -6, 2, 7, 7, 8, 0, 0, 0}; {2, 8, 7, -2, 8, 3, 8, -6, 6, 4, 0, 0}; {6, -2, 6, 6, -3, 5, 7, 8, -7, 1, 0, 0}; {2, -6, 3, -1, 5, 4, 7, -6, 5, 5, 0, 0}; {-1, 4, -4, 0, 0, 5, 2, -7, 7, 4, 0, 0}; {-4, 4, -3, 6, -5, -7, -6, -3, 8, 8, 0, 0}; {-4, 4, -3, 6, -5, -7, -6, -3, 7, 7, 0, 0}; {8, 5, -2, 0, -3, 4, -6, 0, 1, -4, 0, 0}; {8, 5, -2, 7, -7, -1, 6, -7, 6, -2, 0, 0}; {6, 4, -1, -2, 5, -7, 0, -7, 0, -3, 0, 0}; {4, -7, 2, -7, 3, 7, 6, 1, -6, -7, 0, 0}; {4, -7, 2, -7, 3, 7, 6, 1, -7, 8, 0, 0}; {4, -3, -1, 8, -3, -7, 3, -5, -6, -3, 0, 0}; {6, -2, 3, 3, -4, 3, -3, -4, -6, 1, 0, 0}; {7, -2, 6, -2, 1, -1, -1, 0, -6, -7, 0, 0}; {-5, -6, 2, -2, -5, 2, 8, 2, 6, -1, 0, 0}; {-4, 5, -4, 6, -5, -6, -5, -2, 5, 6, 0, 0}; {-2, 6, -2, 7, -5, -5, -4, -3, 8, 7, 0, 0}; {-7, 1, -4, -4, 3, -4, 2, 4, 5, -2, 0, 0}; {2,-5, 5, -7, -2, 0, -7, 3, 1, 1, 0, 0}; {-2, 5, -3, 6, -5, -5, -4, -3, 8, 7, 0, 0}; {2, -6, -5, 3, 6, 0, -6, 1, -3, -1, 0, 0}; {-4, 5, 6, -1, 2, -2, 8, -1, -4, -2, 0, 0}; {-2, 4, -2, 5, 5, -4, -5, 2, 4, 2, 0, 0}; {5,-7, 1, 8, 0, -2, 1, 0, 7, 5, 0, 0}; {6, -1, 7, 6, -2, 4, 8, 8, -7, 2, 0, 0}; {0, 6, 5, -5, 6, -7, -1, 8, 5, 4, 0, 0}; {-2, 6, 8, -1, 4, -2, 6, 0, -3, -2, 0, 0}; {5, -3, 5, 4, -4, 4, 7, 7, -7, 1, 0, 0}; {-2, 5, 6, -2, -6, -1, 7, 1, 1, 2, 0, 0}; {7, 2, -4, 5, 2, 7, -5, 5, 8, 0, 0, 0}; {7, -4, 5, -3, -6, 1, 0, 6, 6, 2, 0, 0}; {4, 7, -7, 1, -7, 4, 8, -4, 7, 3, 0, 0}; {-1, 3, 5, -2, 6, 1, 6, -6, 6, 2, 0, 0}; {-1, -7, 1, 1, -7, 0, 5, 6, 7, 0, 0, 0}; {6, -3, 6, 0, 6, 6, 8, -6, 6, 6, 0, 0}; {-2, 6, -4, 2, -4, -5, -7, 7, -6, -5, 0, 0}; {-2, 6, -4, 2, -4, -5, -7, 7, -6, -6, 0, 0}; {-4, -7, 7, -2, 6, -5, 2, 8, 7, -3, 0, 0}; {8, 1, 0, 8, 7, -3, 4, -3, 2, 0, 0, 0}; {5, -2, 4, -5, 5, 7, 6, 3, 8, 8, 0, 0}; {6, -5, -7, -1, -5, 4, -5, -4, 6, 4, 0, 0}; {8, 3, -6, 4, -4, 0, 1, -1, 5, 6, 0, 0}; {7,-2, 7, -1, 7, 7, -6, -5, 7, 7, 0, 0}; {4, -3, 5, 5, -4, 3, 7, 7, 8, 1, 0, 0}; {-1, -7, 1, 7, 1, 3, 4, 2, 7, 8, 0, 0}; {-1, -7, 1, 7, 1, 3, 4, 2, 7, 7, 0, 0}; {7, 1, 1, 8, -5, 3, 7, 2, -4, 0, 0, 0}; {-5, 1, -5, 7, -4, 5, 5, -1, -4, -4, 0, 0}; {-3, 6, -3, 8, 0, 3, 2, 1, 6, 6, 0, 0}; {3, 7, -1, 6, -1, -2, -1, -1, -6, 8, 0, 0}; {7, 0, -7, 4, -6, -1, 5, 8, 7, 6, 0, 0}; {0, 7, 7, -1, -5, 0, 7, 1, 4, 3, 0, 0}; {0, 7, 7, -1, -5, 0, 7, 1, 3, 2, 0, 0}; {1, -5, 1, -5, 2, 5, 4, 2, 7, 7, 0, 0}; {-7, 3, -4, -4, 5, -3, 2, 3, 7, -1, 0, 0}; {-7, 3, -4, -4, 5, -3, 2, 3, 6, -1, 0, 0}; {-4, 3, -5, 2, 4, 1, 1, 2, -5, -6, 0, 0}; {-3, 6, 6, -1, 0, 7, -1, -6, -2, -2, 0, 0}; {7, -1, 7, 1, 2, -6, -1, -3, -6, -4, 0, 0}; {3, -5, -5, 4, 2, -6, 1, -5, 0, 0, 0, 0}; {-6, 0, -7, -1, 4, 1, -2, 6, 4, -2, 0, 0}; {-7, 1, 0, -7, 7, -4, 4, -2, 1, 1, 0, 0}; {-5, 4, 4, -3, -2, 6, -3, 8, -3, -3, 0, 0}; {-2, 4, -7, 8, 0, 6, 1, -2, -4, 2, 0, 0}; {1, -7, 2, 8, 4, 5, 4, 2, -7, -7, 0, 0}; {8, 0, 8, 2, -3, 0, 1, 0, 5, 6, 0, 0}; {4, -5, -6, 1, -2, 3, 8, 1, 4, 2, 0, 0}; {4, -4, -4, 3, 2, -5, 3, 7, 2, 0, 0, 0}; {0, 8, -4, 2, -5, 5, -2, -5, -5, -5, 0, 0}; {-2, -3, 8, 8, 0, 6, -2, 6, -3, -4, 0, 0}; {-3, 3, -4, 8, -3, 6, 6, -1, -4, -4, 0, 0}; {0, -6, -5, 5, -6, 7, 1, 8, -5, -4, 0, 0}; {-5, 3, -4, 6, -6, -7, -6, -3, 7, 7, 0, 0}; {-4, 0, 3, -4, 4, 0, 5, -7, 5, 2, 0, 0}; {1, -7, 1, 8, 4, 6, 4, 2, -7, -7, 0, 0}; {-7, 7, 1, -5, -6, -1, 6, 1, 6, -2, 0, 0}; {6, 0, -1, 7, -3, 2, -4, 8, -4, -2, 0, 0}; {-6, -2, 0, 7, -2, 8, -3, -4, 8, 3, 0, 0}; {4, 8, -2, -3, 2, -6, 3, 0, -3, 3, 0, 0}; {-2, 1, -7, -2, 1, -4, 6, -4, 8, 1, 0, 0}; {5, 0, -7, 1, -6, -2, 0, -1, 4, 6, 0, 0}; {-1, -3, 6, -1, -2, 4, -6, 4, -7, 0, 0, 0}; {-2, -7, 4, -5, 3, 4, -3, -1, -5, -1, 0, 0}; {-6, 4, 7, 0, 7, 3, -2, 7, -7, -4, 0, 0}; {-6, -3, -2, 6, -3, 8, 0, -6, -6, 4, 0, 0}; {4, -4, 3, -4, 0, -2, -2, 0, 8, 8, 0, 0}; {-5, 6, -1, 8, 5, -6, -2, 7, -6, 1, 0, 0}; {8, 2, -5, 4, -7, 8, 8, -3, 2, 5, 0, 0}; {2, 8, 1, -4, -1, 7, 8, 0, -1, -3, 0, 0}; {-7, 2, 7, -3, 8, -6, 8, 4, -7, -7, 0, 0}; {-7,2, 7, -3, 8, -6, 8, 4, -7, 8, 0, 0}; {7, 1, 4, -3, 4, 0, -3, -7, -5, -4, 0, 0}; {-4,3, 1, 8, -7, -1, 6, -1, 2, 0, 0, 0}; {-4, 5, -4, 6, -5, -7, -6, -3, 7, 7, 0, 0}; {1, 5, -2, 3, 0, 6, 3, -6, 8, 4, 0, 0}; {6, -3, 4, 4, -5, 2, -2, -3, -6, 1, 0, 0}; {-4, 1, 7, -1, -7, -5, -6, 4, 0, -3, 0, 0}; {-3, 7, 5, -1, 7, -6, 5, 7, 6, -4, 0, 0}; {1, -7, 2, -2, 4, 3, 6, -7, 5, 5, 0, 0}; {0, -7, 2, 2, 8, 0, 5, 6, 7, 0, 0, 0}; {5, -4, 1, 2, -5, 2, -3, -5, -7, 0, 0, 0}; {7, 2, -4, 3, 8, 7, 7, -3, 1, 4, 0, 0}; {-7, 0, -7, 4, 8, 7, -6, -4, 7, 7, 0, 0}; {3, 7, -1, 7, -2, -4, 0, -1, 7, 5, 0, 0}; {7, -3, -3, 4, -1, 4, -5, 4, 4, 3, 0, 0}; {1, 5, -2, 5, -3, -4, -2, -2, -6, 8, 0, 0}; {-7, -2, 5, 4, -3, 4, -1, -3, -5, 0, 0, 0}; {7, 1, 2, -5, -1, -5, 4, -5, -4, -3, 0, 0}; {-4, 4, -3, 5, -6, -6, -5, -4, 8, 7, 0, 0}; {5, -3, 3, -1, -1, 8, -1, -4, -7, -5, 0, 0}; {3, -4, -5, 2, 5, -6, 3, -3, 0, -1, 0, 0}; {5, -3, 5, 1, 6, 6, 8, -5, 5, 5, 0, 0}; {0, 8, -7, 2, 4, -1, -7, 0, -4, -1, 0, 0}; {4, -4, 6, 0, 6, 6, 8, -6, 6, 5, 0, 0}; {1, -6, 5, -1, 6, -4, 2, 5, 5, 5, 0, 0}; {8, 1, -4, -4, 3, -4, 2, 3, 6, -1, 0, 0}; {6, -2, -2, 7, 4, -5, 3, -4, 0, 0, 0, 0}; {-5, 2, 2, -5, 6, -5, 4, 0, 1, -2, 0, 0}; {6, -1, 8, 1, 8, 7, 7, -3, 1, 4, 0, 0}; {-7, -2, 4, -5, -3, -7, 4, -5, 7, 0, 0, 0}; {-3, 5, -4, -4, 6, -2, -7, -7, -7, 0, 0, 0}; {-3, 5, 5, -3, -6, -1, 6, 0, 3, 2, 0, 0}; {-3, 5, 5, -3, -6, -1, 6, 0, 2, 2, 0, 0}; {-5, 4, -5, -6, 1, 7, -6, -7, -6, 3, 0, 0}; {3, -3, 7, 1, 1, 6, -7, 4, 7, 0, 0, 0}; {3, -5, 4, 4, -6, 2, 7, 7, 7, 0, 0, 0}; {7, -2, 3, 7, 1, 0, -3, -7, -3, -4, 0, 0}; {-7, 3, -4, -3, 4, -3, 2, 4, 5, -1, 0, 0}; {-3, 3, 1, 7, 6, 0, 6, -7, 4, 3, 0, 0}; {5, -5, -3, 6, 0, -3, 3, 6, 3, 0, 0, 0}; {8, -2, 0, 8, -6, 4, -4, 6, -1, -1, 0, 0}; {6, -6, 1, -7, 0, -2, 1, 0, 7, 5, 0, 0}; {-7, 1, -7, -2, -7, -6, 7, 5, -6, -6, 0, 0}; {-4, 4, 3, -5, -4, 6, -1, 4, 0, 0, 0, 0}; {3, -4, 4, 4, -5, 3, 6, 7, 8, 1, 0, 0}; {4, -1, -3, 4, -4, 0, -5, 7, -5, -2, 0, 0}; {3, -7, 3, -5, 3, 4, 8, -7, 6, 6, 0, 0}; {4, -4, 2, 8, 3, -1, 5, 5, 7, 7, 0, 0}; {3, -5, -1, 7, 6, 1, 6, 2, -4, -3, 0, 0}; {3, -1, -3, 4, -4, 0, -5, 7, -6, -3, 0, 0}; {-5, 3, 8, -1, 7, 2, -3, 8, -7, -6, 0, 0}; {0, 8, -6, 3, 1, 7, 0, -5, -2, 0, 0, 0}; {-6, 2, -7, 3, 3, -5, -1, -2, -5, -4, 0, 0}; {-5, 5, -2, 7, -4, -7, -5, -1, 4, 5, 0, 0}; {-2,-7, 7, 0, 7, -5, 4, 8, 7, -3, 0, 0}; {2, -1, 6, -3, -6, 6, -1, 1, -6, -1, 0, 0}; {-5, 4, -5, 4, -1, 2, 3, 0, 6, 7, 0, 0}; {-7, 2, -4, -3, 3, -4, 2, 4, 5, -2, 0, 0}; {-3, 6, -2, 6, 0, 2, 3, 1, 6, 7, 0, 0}; {5, -4, -5, 2, -1, 3, -7, 1, 5, 2, 0, 0}; {-6, 0, 7, -1, -3, 3, 2, 6, 5, 4, 0, 0}; {-1, 6, -2, 6, 1, 4, 4, 0, 8, 8, 0, 0}; {4, -7, -1, 6, 3, 8, 7, -6, 8, 5, 0, 0}; {7, 2, -6, 4, -6, 7, -7, -2, 4, 5, 0, 0}; {-1, 8, -7, 1, 4, 0, 8, -1, -3, 0, 0, 0}; {-5, 2, 2, -6, 8, -3, 5, -2, 2, 1, 0, 0}; {8, -1, 6, -3, -7, 8, 8, 5, -7, -6, 0, 0}; {-3, -5, 5, -3, -3, 3, -7, 3, -7, 0, 0, 0}; {-7, 0, -7, -7, 3, -5, 8, 8, 7, -2, 0, 0}; {-7, -1, 5, 4, -3, 4, -1, -3, -5, 1, 0, 0}; {-7, 4, 0, 7, -1, 2, -3, -6, -4, -1, 0, 0}; {-4, 4, 4, -5, -4, 6, -1, 6, 0, 1, 0, 0}; {-1, 8, 7, 0, 1, -7, -1, -7, -2, -3, 0, 0}; {8, 5, -4, 6, 3, 8, -2, 7, -6, 1, 0, 0}; {-4, 5, -2, -2, 6, -2, 3, 5, 6, -1, 0, 0}; {-6, 2, -7, 2, 2, -4, 0, -2, -6, -4, 0, 0}; {5, 0, -7, -6, 3, -5, 1, 3, 5, -1, 0, 0}; {3, 8, 7, -3, 5, -7, 1, -7, 7, 3, 0, 0}; {-1, 8, -1, 6, 3, 4, 4, 1, 7, 8, 0, 0}; {6, -3, 2, 2, -5, 2, -3, -4, -7, 0, 0, 0}; f 8, 4, -6, 4, -5, 7, 8, -2, 6, 7, 0, 0}; {2,-3, 7, 8, 0, -7, -1, 1, 3, -2, 0, 0}; {1, -5, 3, -7, 3, 4, 5, 3, 7, 8, 0, 0}; {-7, 5, 3, -4, 4, -7, 3, 6, 6, -5, 0, 0}; {-4, 1, 8, 7, -1, 5, 0, -1, -5, 1, 0, 0}; {3, -4, -7, 0, 5, -7, 2, -4, -1, 0, 0, 0}; {3, -5, 3, -5, 0, -3, -3, 0, -7, -7, 0, 0}; {2, -4, 4, -5, 3, 5, 5, 3, 7, 8, 0, 0}; {3, 7, -1, 6, -1, -3, 0, -2, -6, -7, 0, 0}; {-2, 5, 6, -2, -6, -2, 6, 2, 0, 1, 0, 0}; {4, 8, 0, 5, 3, 8, 4, -5, -7, 4, 0, 0}; {8, 0, 7, 1, 2, -6, -1, -3, -6, -4, 0, 0}; {4, -5, 2, 2, -6, 3, -4, -5, -6, 2, 0, 0}; {-7, -2, 7, -3, 4, 1, -2, 6, 4, -2, 0, 0}; {-3, 1, 8, -2, 0, -5, 6, -4, 8, 1, 0, 0}; {-3, 1, 8, -2, 0, -5, 6, -4, -7, 0, 0, 0}; {4, -5, 4, -5, 7, 8, 5, 4, -7, -7, 0, 0}; {0, 6, 7, -1, 7, 4, -7, 7, 8, 3, 0, 0}; {-1, 7, 3, -7, -4, 0, 8, 1, 2, 1, 0, 0}; {8, 0, 7, -2, -7, 8, 7, 5, -7, -6, 0, 0}; {6, -2, -1, 6, -7, 3, -5, 3, -1, -1, 0, 0}; {2, 8, 0, 0, 8, 0, -4, -5, -7, 0, 0, 0}; {-1, -6, 1, -7, 1, 3, 3, 2, 7, 7, 0, 0}; {-5, 1, 7, 6, -1, 6, -1, -2, -4, 2, 0, 0}; {7, -1, 8, 2, 7, 7, -7, -5, 6, 6, 0, 0}; {-7, 0, 4, -5, 3, 0, -2, -5, -5, -4, 0, 0}; {7, 1, -5, 4, 8, 8, 8, -4, 2, 5, 0, 0}; {-3, 1, -7, 1, -2, 4, 3, 8, 6, 5, 0, 0}; {-1, 8, 7, -3, 4, 5, -1, -5, -2, 1, 0, 0}; {3, 0, 8, 3, -1, 5, -6, 4, 8, -1, 0, 0}; {0, 7, -2, 7, 7, -1, 2, 0, -4, -3, 0, 0}; {2, -5, 8, 4, -6, 1, -1, 2, -5, -1, 0, 0}; {1, 6, -1, 4, -7, 5, 1, 8, 6, -1, 0, 0}; {8, 2, 0, 7, -2, 2, -4, -7, -3, 0, 0, 0}; {0, 8, 3, -3, 3, 4, 6, 8, 6, 5, 0, 0}; {-7, -2, 6, -3, -4, 2, 1, 7, 5, 3, 0, 0}; {7, -1, 6, -4, 7, 7, 7, 4, -7, -7, 0, 0}; {-1, 5, -6, 4, -3, -6, 0, 2, 4, 1, 0, 0}; {-4, 4, 7, -3, 5, 2, -1, -4, -4, -3, 0, 0}; f-1, 5, 6, -3, -2, 7, -2, 7, 0, 1, 0, 0}; {-4, 4, -5, 1, -6, -6, -6, 7, -7, -6, 0, 0}; {-5, 3, -5, -6, 0, 7, -5, -7, -7, 2, 0, 0}; {-2, -5, 5, -2, -3, 3, -7, 3, 8, -1, 0, 0}; {3, -1, 8, 2, 0, 5, -6, 4, 7, 0, 0, 0}; {3, -1, 8, 2, 0, 5, -6, 4, 8, -1, 0, 0}; {7, -1, 0, 7, -7, 4, -4, 2, -1, -1, 0, 0}; {-3, 6, -7, 0, 6, 3, -1, -4, -4, -2, 0, 0}; {7, -6, 2, 7, -3, 8, 4, -6, 8, 0, 0, 0}; {-2, 6, 8, 0, -3, 8, 0, 5, 1,-1, 0, 0}; {2, -5, 2, -7, 3, 5, 5, 3, 7, 8, 0, 0}; {2, -5, 3, -3, -1, 7, -4, -5, -7, -5, 0, 0}; {5, -3, -3, 5, 5, -5, 3, -3, 0, -1, 0, 0}; {-6, 1, -2, 6, -5, 3, 5, 0, -2, -3, 0, 0}; {-5, 4, 4, -4, -1, 5, -3, -7, -2, -1, 0, 0}; {-2, 8, -6, 4, -7, 6, 1, -7, -7, -4, 0, 0}; {-6, -2, -1, 5, -2, 6, -3, -2, 8, 3, 0, 0}; {0, -5, 5, -1, -1, 4, 8, 3, 6, -1, 0, 0}; {4, -6, -3, 6, -1, -4, 1, 6, 3, 1, 0, 0}; {3, 2, -4, 7, 6, -4, 3, -1, 4, -3, 0, 0}; {4, -4, -5, 3, 4, -6, 2, -4, 0, 0, 0, 0}; {-6, 3, 6, -3, 4, 1, -2, -5, -5, -3, 0, 0}; {7, -2, 3, -3, 7, 5, -4, -1, 1, 1, 0, 0}; {-3, 5, -3, -4, 1, 8, -4, -6, -6, 2, 0, 0}; {-6, 3, 4, -2, -3, 4, -3, -7, -3, -2, 0, 0}; {8, -1, 4, 4, -3, 3, -2, -4, -6, 0, 0, 0}; {2,-6, 1, 1, -6, 1, -4, -5, -6, 1, 0, 0}; {3, -6, 0, 1, -7, 1, -4, -6, -7, 0, 0, 0}; {1, -6, 3, -4, -1, 6, -4, -5, -7, -5, 0, 0}; {-7, -2, 7, -3, -5, 1, 0, 7, 6, 4, 0, 0}; {3, -5, 3, -2, -1, 8, -4, -4, -7, -5, 0, 0}; {7, -1, -1, 8, 5, -5, 4, -3, 1, 1, 0, 0}; {4, 6, -4, 2, 4, -1, -7, -2, -6, 2, 0, 0}; {3, -6, 3, -6, 6, 7, 4, 3, -6, -6, 0, 0}; {-3,6,-2, 7, -4, -6, -6, -3, 8, 7, 0, 0}; {-3, -7, -3, -7, -4, 4, -1, 1, 6, -7, 0, 0}; {7, 0, 6, -3, 8, 7, 6, 5, 8, -6, 0, 0}; {-2, 4, 2, -6, 3, 4, -5, 6, 7, 2, 0, 0}; {4, -4, 5, 5, -5, 3, 7, 7, -7, 1, 0, 0}; {-3, 1, -2, 3, -1, 8, -2, -2, 8, 6, 0, 0}; {-1, -7, 5, -4, 4, 4, -2, -1, -5, -1, 0, 0}; {-5, -3, 2, 8, -7, 3, -4, 1, -4, 3, 0, 0}; {-7, 1, -7, 8, -2, 5, -7, -7, -7, 1, 0, 0}; {-1, 8, 8, 1, 1, 7, 0, -6, -1, -1, 0, 0}; {-2, 6, -2, 8, -3, -5, -5, -2, 7, 7, 0, 0}; {7, -1, 7, 1, 2, -6, -2, -3, -6, -4, 0, 0}; {-5, 1, 7, 7, -2, 5, 0, -1, -5, 1, 0, 0}; {4, -7, 0, 7, 0, -2, 1, 0, 7, 5, 0, 0}; {5, -2, -3, 6, 5, -5, 3, -3, 1, 0, 0, 0}; {-6, 4, -3, -3, 5, -3, 3, 4, 6, -1, 0, 0}; {5, 0, -6, -6, 2, -4, 1, 2, 5, -1, 0, 0}; {4, -3, 5, -2, -1, -7, -3, -4, -7, -5, 0, 0}; {2, -4, 1, -7, 0, -3, -6, 8, -6, -5, 0, 0}; {-3, 4, -4, -4, 5, -3, -6, -7, 8, -1, 0, 0}; {7, 0, 0, 8, -6, 4, -3, 2, -1, -2, 0, 0}; {8, -2, 4, -3, 7, -6, 8, 3, -2, -4, 0, 0}; {0, -4, -3, 6, -1, 4, 1, 3, 5, -6, 0, 0}; {4,-4,5, 1, 7, 6, 8, -5, 5, 5, 0, 0}; {7, -1, -3, 7, 5, -4, 3, -5, 0, 0, 0, 0}; {-1, 6, 0, 6, 1, 3, 4, 0, -7, -7, 0, 0}; {-2, 6, 4, -3, -7, 0, 6, -2, 1, 1, 0, 0}; {8, 1, 7, -2, 8, 7, 7, 6, 8, -7, 0, 0}; {0, 8, 1, -7, -3, -4, -4, -2, -7, 8, 0, 0}; {4, -5, 3, -2, -1, 8, -3, -4, -7, -5, 0, 0}; {-1, -7, 1, -3, 4, 4, 5, -5, 1, 4, 0, 0}; {2, -7, 0, 0, -7, 1, -4, -5, -6, 1, 0, 0}; {1, 6, -4, 5, -2, -4, 0, -1, 5, 4, 0, 0}; {4, -2, 5, -4, 4, 6, 6, 4, 8, 8, 0, 0}; {4, -2, 5, -4, 4, 6, 6, 4, 7, 8, 0, 0}; {7, -2, -1, 7, 5, -5, 2, -3, 1, 1, 0, 0}; {7, -1, 7, -4, 8, -7, 6, 4, -6, -6, 0, 0}; {5, -3, 5, 6, -1, -7, 6, 7, 6, -3, 0, 0}; {6, -4, 3, -5, 5, 8, 7, 2, -5, -6, 0, 0}; {8, 3, -4, -3, 4, -3, 2, 3, 6, 0, 0, 0}; {5, -4, 3, -5, 5, 7, 6, 3, -7, -7, 0, 0}; {6, 0, -6, -6, 3, -4, 1, 2, 5, -1, 0, 0}; {1, 5, -5, 1, 2, -3, 8, -2, -6, 1, 0, 0}; {4, -5, 3, -6, 6, 6, 5, 3, -7, -6, 0, 0}; {2, -6, -5, 4, 1, 8, 0, -5, -1, 0, 0, 0}; {5, -5, 4, -3, 5, 5, -7, -6, 6, 6, 0, 0}; {-6, -1, 8, 1, 5, -4, -5, 4, 1, -2, 0, 0}; {7, -2, 6, -1, 7, 7, -6, -5, 7, 7, 0, 0}; {-3, 3, -4, 4, -1, 2, 3, -2, -5, -7, 0, 0}; {1, 6, 8, 0, 8, 4, -6, 7, 8, 3, 0, 0}; {-2, 5, 5, -4, -3, 8, 0, 4, 0, 1, 0, 0}; {6, -4, 3, 2, -5, 3, -3, -4, -5, 1, 0, 0}; {4, -4, 4, -4, 0, -2, -2, -1, -7, 8, 0, 0}; {-7, 1, -6, 2, 8, 8, -6, -5, 7, 7, 0, 0}; {3, -2, -3, 4, -4, 0, -6, 7, -5, -1, 0, 0}; {6, -4, 4, -3, 6, 5, -6, -6, 3, 3, 0, 0}; {0, 5, -6, -7, 1, 7, 2, -1, -4, 2, 0, 0}; {7, -3, 0, 8, 1, -1, 6, 4, 6, 1, 0, 0}; {-5, 3, 2, -6, 8, -2, 4, -3, 1, 0, 0, 0}; {-3, 3, -3, 5, 4, -5, -5, 2, 4, 1, 0, 0}; {1, -5, -3, 6, -5, 7, 2, -6, -7, -3, 0, 0}; {7, -4, 4, 3, -4, 3, -2, -3, -6, 0, 0, 0}; {-1, 3, 3, -6, 1, -5, 0, -4, -5, 5, 0, 0}; {-1, 7, 0, 7, 4, 4, 3, 2, 8, -7, 0, 0}; {-2, 6, 2, -6, -6, 1, 6, -2, 1, 0, 0, 0}; {-2, 5, 5, -4, -6, -1, 6, -1, 3, 1, 0, 0}; {-2, 7, 7, 0, 0, 7, 0, -6, -1, -1, 0, 0}; {4, -2, 4, -5, 5, 7, 6, 3, 8, 8, 0, 0}; {-2, 7, -6, 4, 4, -2, 7, 4, -5, -2, 0, 0}; {3, -2, 4, -4, 4, 6, 5, 3, 7, 8, 0, 0}; {8, -4, 5, -5, 5, -7, 7, 2, -5, -6, 0, 0}; {8, -4, 5, -5, 5, -7, 7, 2, -6, -7, 0, 0}; {6, 3, 2, -6, 3, 8, 0, 6, 6, -4, 0, 0}; {3, -4, 2, -5, 4, 5, 5, 3, 7, 8, 0, 0}; {2, 1, -5, 6, 6, -4, 3, -1, 4, -3, 0, 0}; {1, -2, 7, 1, -1, 4, -7, 4, 7, -1, 0, 0}; {-3, 8, -4, 7, 0, -6, -6, 5, -7, -5, 0, 0}; {-4, -7, 7, -1, 7, -4, 8, 4, -7, -3, 0, 0}; {5, -5, 5, -3, 6, 6, -7, -6, 7, 7, 0, 0}; {6, -2, 6, 0, 1, -6, -2, -3, -6, -4, 0, 0}; {5, -4, 1, -4, 6, 4, -5, -1, 1, 1, 0, 0}; {1, -4, 3, -6, 3, 5, 4, 3, 7, 8, 0, 0}; {7, -1, 0, 7, -7, 4, -4, 3, -1, -1, 0, 0}; {8, 0, 3, -6, 0, -6, 4, -3, -5, -3, 0, 0}; {6, -3, -7, -1, 0, 4, -5, 3, 4, 1, 0, 0}; {-5, -2, 5, -3, 3, 0, 3, 1, 8, 6, 0, 0}; {4, 8, 2, 2, -5, -1, 8, 3, -4, -3, 0, 0}; {2, -4, -3, 7, -4, 8, 2, -7, -4, -3, 0, 0}; {5, -3, 0, 7, -2, 8, 2, -4, -5, -4, 0, 0}; {8, 3, -5, 3, -4, 0, 2, 0, 5, 6, 0, 0}; {8, 1, 8, -3, 7, 8, 7, 4, -6, -6, 0, 0}; {8, 1, 8, -3, 7, 8, 7, 4, -7, -7, 0, 0}; {4, 0, 8, -2, -5, 1, 4, -5, 0, 3, 0, 0}; {-4, 3, 3, -4, 8, -2, 6, -1, 2, 2, 0, 0}; {7, 3, 2, -5, 3, 8, 1, 6, 6, -4, 0, 0}; {-2, 8, -6, 3, -7, 5, 0, 7, -5, -4, 0, 0}; {-5, 5, -4, 6, -5, -7, -6, -2, 6, 7, 0, 0}; {0, -6, 1, -6, 1, 4, 4, 2, 7, 7, 0, 0}; {0, -6, 1, -6, 1, 4, 4, 2, 6, 7, 0, 0}; {3, -5, 1, 0, -6, 2, -4, -5, -6, 1, 0, 0}; {3, -6, -7, 1, -4, 0, 8, 3, 2, 0, 0, 0}; {4, 8, -1, 8, -6, 1, -1, 6, 3, -1, 0, 0}; {7, -1, 7, 7, -3, 5, 8, 8, -7, 1, 0, 0}; {-3, 8, -1, 8, -3, -7, -5, -1, 6, 7, 0, 0}; {5, -1, -2, 6, -4, 1, -5, 7, -4, -1, 0, 0}; {-7, 0, 6, 5, -2, 5, -1, -3, -4, 2, 0, 0}; {4, 8, 0, 6, -5, 6, 2, -7, 6, 0, 0, 0}; {2, -5, 2, -3, -2, 7, -4, -5, -7, -5, 0, 0}; {1, -5, 2, -5, -1, -4, -3, 0, 7, 7, 0, 0}; {1, -5, 2, -5, -1, -4, -3, 0, 6, 7, 0, 0}; {4, 0, 3, -2, 2, -7, 3, 3, -7, -5, 0, 0}; {-5, 6, 8, 2, 6, -4, 6, 5, -6, -4, 0, 0}; {5, -2, -2, 6, 8, 3, -5, 2, -2, -1, 0, 0}; {-4, 6, -3, 6, -2, 1, 2, 0, 6, 6, 0, 0}; {-2, 8, 0, 7, -1, 1, 6, 7, 0, 0, 0, 0}; {-2, 7, -3, 1, -5, -4, -7, 6, -6, -6, 0, 0}; {-3, 5, -4, -3, 6, -3, -7, -7, 8, -1, 0, 0}; {-1, 6, 0, 8, -3, -6, -5, -2, 8, 8, 0, 0}; {1, -7, 8, 1, -4, 2, -7, 1, 2, 2, 0, 0}; {4, -3, 6, 5, -5, 3, 7, 8, 8, 1, 0, 0}; {-3, 7, -3, 2, -5, -4, -7, 6, -6, -6, 0, 0}; {4, -2, 5, -6, 5, 7, 5, 3, 8, -7, 0, 0}; {0, 6, 0, 8, 5, -4, -1, 5, 4, 3, 0, 0}; {-6, 4, 2, -7, -1, 3, -4, -7, -3, 0, 0, 0}; {-2, 3, -4, 1, 7, 4, 0, 8, 5, -1, 0, 0}; {-4, 6, 0, 1, 8, 8, -1, 4, -1, 0, 0, 0}; {-2, 7, 0, 8, -3, -5, -5, -2, 8, 8, 0, 0}; {5,-2,-3, 7, 4, -6, 3, -5, 0, 0, 0, 0}; {-3, 3, -4, 4, 4, -5, -4, 3, 2, 3, 0, 0}; {6, 0, -7, -7, 3, -5, 0, 1, 5, -2, 0, 0}; {6, -4, 5, 1, 7, 6, 8, -5, 7, 6, 0, 0}; {4, -6, 1, 1, -7, 2, -3, -4, -6, -1, 0, 0}; {3, -4, -6, 1, 5, -7, 2, -3, -1, -1, 0, 0}; {1, -3, 5, -4, 8, 7, -1, 1, -7, -2, 0, 0}; {2, 7, -7, 0, -7, 5, -4, 8, -7, 3, 0, 0}; {-1, -5, 4, -6, 8, -3, 2, -6, -3, 3, 0, 0}; {1, -4, 0, -6, 1, -2, -5, 4, 6, -5, 0, 0}; {-7, -3, 4, -5, -3, 8, 3, -6, 6, -1, 0, 0}; {-6, 5, -2, -2, 5, -2, 3, 4, 6, 0, 0, 0}; {-2, -7, 0, 8, 0, 3, 3, 2, 6, 7, 0, 0}; {1, 6, 0, -6, -1, 6, 7, 0, -2, -4, 0, 0}; {4, -4, -4, 4, 4, -6, 2, -4, 0, -1, 0, 0}; {3, -5, 3, -5, -1, -3, -3, -1, -7, 8, 0, 0}; {-4, 1, 7, 7, -1, 6, 1, -2, -4, 1, 0, 0}; {-1, 6, -2, -1, 6, -2, -5, -5, 8, 0, 0, 0}; {-4, 5, 1, -5, 3, -7, -1, 4, 4, 4, 0, 0}; {-6, 2, -7, -2, 8, -7, 8, 5, -6, -6, 0, 0}; {8, 2, -4, 4, -7, 7, -7, -3, 2, 4, 0, 0}; {1, -4, 6, 7, 1, -7, -2, 1, 3, -2, 0, 0}; {-6, 2, -6, -6, 3, -5, -7, 8, 7, -1, 0, 0}; {-1, 8, 0, 8, -2, -5, -5, 0, 6, 7, 0, 0}; {6, -1, -3, 5, 6, -4, 3, -4, 0, -2, 0, 0}; {2, -7, 2, -2, 5, 4, 7, -6, 6, 6, 0, 0}; {6, 1, 3, -2, 4, 1, -3, 5, -7, -5, 0, 0}; {6, -1, 6, -4, 7, 8, 6, 4, -7, -7, 0, 0}; {3, -5, 3, -6, 6, 6, 4, 3, -6, -5, 0, 0}; {-7, -2, 8, -3, 4, 1, -2, 6, 4, -2, 0, 0}; {-1, 7, 0, -4, -3, 6, -5, -6, 8, -4, 0, 0}; {-1, 7, -2, 1, -5, -4, -7, 6, -5, -5, 0, 0}; {-5, 3, 2, -6, -5, 6, -2, 3, 0, 0, 0, 0}; {3, -3, 4, -5, 4, 5, 5, 4, 7, 8, 0, 0}; {-3, 2, -6, 0, -2, 4, 1, 8, 7, 3, 0, 0}; {-7, 4, -4, 4, -4, 0, 2, 1, 5, 6, 0, 0}; {2, 7, -4, -5, 3, -7, 3, 1, -3, 3, 0, 0}; {-7, -1, 5, -2, 7, -6, -6, 3, 0, -3, 0, 0}; {-7, -1, 5, -2, 7, -6, -6, 3, -1, -4, 0, 0}; {-6, 6, -2, -6, 3, 8, -4, 6, 8, 0, 0, 0}; {-5, 0, 7, 7, -3, 5, -1, -2, -6, 1, 0, 0}; {-1, -6, -7, 1, -7, -3, 8, 6, -6, -2, 0, 0}; {3, -5, 1, -6, 4, 6, 6, 3, 8, 8, 0, 0}; {4, 8, -1, -7, -5, 4, 0, 8, 2, -1, 0, 0}; {-6, -1, 6, 6, -3, 4, -1, -2, -6, 1, 0, 0}; {6,-2,-2, 7, 4, -6, 2, -3, 0, 0, 0, 0}; {-6, 3, 2, -7, 7, -2, 5, -5, 2, 0, 0, 0}; {-6, 2, -4, 5, -6, -7, -6, -4, 8, 7, 0, 0}; {-6, 4, -3, -2, 4, -3, 3, 4, 5, -1, 0, 0}; {1, 8, 1, -6, -2, -5, -5, -1, -7, -7, 0, 0}; {-6, 3, -4, -3, 5, -2, 2, 4, 5, -1, 0, 0}; {-2, 6, -4, 7, 2, 1, 8, -3, -2, 0, 0, 0}; {-2, 6, -4, 7, 2, 1, 8, -3, -1, -1, 0, 0}; {-3, 1, 1, 8, -1, -6, -2, -4, -6, 5, 0, 0}; {-2, 3, -2, -7, 1, -4, -4, 7, -6, 0, 0, 0}; {-6, 0, 6, 6, -3, 4, -1, -2, -5, 1, 0, 0}; {8, -2, 8, 0, 1, 4, 0, 1, 7, 5, 0, 0}; {6, -5, 4, -2, 3, -6, -7, 3, -1, -3, 0, 0}; {-2, -7, -1, 8, 0, 3, 3, 1, 6, 7, 0, 0}; {-1, -7, -5, 4, -6, 6, 1, -7, -7, -4, 0, 0}; {-2, 3, -1, 4, 0, -6, -2, -2, -7, 7, 0, 0}; {-5, 6, 8, 2, 6, -4, 7, 5, -6, -5, 0, 0}; {8, -1, 6, 1, 1, -6, 0, -3, -6, -4, 0, 0}; {-4, 6, -3, 7, -5, -7, -5, -2, 6, 7, 0, 0}; {-5, 4, -4, 6, -3, 2, 3, 0, 5, 6, 0, 0}; {-5, 4, 3, -4, 8, -1, 6, -2, 1, 1, 0, 0}; {2, -6, -1, -6, 5, 3, -6, -2, 0, 0, 0, 0}; {2, -6, -1, -6, 5, 3, -6, -2, 0, -1, 0, 0}; {2, 5, -4, 2, 3, -2, 8, -3, -7, 1, 0, 0}; {-1, -6, 4, -3, 3, 3, 4, -6, -1, 3, 0, 0}; {-1, 4, -6, -7, 1, 7, 1, -1, -4, 1, 0, 0}; {2, -6, 2, -7, 5, 5, 4, 3, 8, -7, 0, 0}; {-1, 3, -4, 2, -1, 4, 4, -6, 7, 4, 0, 0}; {-3, 4, 7, -3, 3, -3, 6, -1, -3, -2, 0, 0}; {1, -7, 2, -6, -2, -4, -4, -1, -7, -7, 0, 0}; {-2,3,-4, 7, -4, 5, 6, -1, -3, -6, 0, 0}; {7, 0, -6, 2, 0, 1, -3, -1, 8, -6, 0, 0}; {4, 7, -6, 2, -3, 2, -2, -2, -4, 7, 0, 0}; {-5, 4, 5, -2, 1, -3, 7, -1, -5, -2, 0, 0}; {-1, 5, -4, 3, 7, 4, 0, 8, 5, -1, 0, 0}; {-4, 3, -7, 0, -5, -6, -7, 7, -6, -6, 0, 0}; {8, 0, -7, 2, 7, 8, -7, -5, 7, 6, 0, 0}; {5, -3, 5, -1, 0, 8, -3, -4, -6, -5, 0, 0}; {-6, 5, 5, -3, 5, -7, 4, 8, 7, -3, 0, 0}; {-6, 3, -4, -3, 4, -3, 3, 4, 5, -1, 0, 0}; {-5, 2, 7, 0, -5, -7, 1, 1, 4, 0, 0, 0}; {-5, 5, 4, -5, 1, 4, -2, -6, -3, -1, 0, 0}; f-4, 5, -2, -2, 6, -3, 4, 5, 6, -2, 0, 0}; {1, 7, 1, -6, 3, 4, 7, 8, 6, 6, 0, 0}; {5, -2, 5, -3, 2, -1, -2, 2, 6, 7, 0, 0}; {3, -4, 0, 7, -1, -2, -5, 8, -6, -5, 0, 0}; {8, -5, 4, -5, -3, 8, 2, -7, 6, -1, 0, 0}; {2, 8, 0, 0, 8, 0, -4, -4, -7, 0, 0, 0}; {-5, 4, 5, -2, 2, -3, 6, -2, -4, -2, 0, 0}; {2, -2, 7, 2, -1, 4, -7, 4, 7, -1, 0, 0}; {5, -4, -5, 2, 1, -5, 2, 7, 1, 1, 0, 0}; {8, 3, -7, -1, 7, -7, 7, 5, -7, -7, 0, 0}; {-2, 6, -3, -4, 2, -7, -5, -6, -5, 3, 0, 0}; {-6, 2, 1, -7, 8, -3, 5, -1, 2, 0, 0, 0}; {-6, 2, 1, -7, 8, -3, 5, -1, 1, 0, 0, 0}; {-7, 0, 8, 7, -2, 6, -7, 8, -7, 1, 0, 0}; {-4, 5, -2, -2, 6, -2, 3, 4, 6, 0, 0, 0}; {-4, 5, -2, -2, 6, -2, 3, 4, 6, -1, 0, 0}; {-2, -3, 8, 8, 0, 6, -3, 6, -3, -4, 0, 0}; {-3, 5, -5, 5, 5, -3, 1, -1, -5, -3, 0, 0}; {-3, 6, -6, 1, -7, 3, -2, -6, -5, -5, 0, 0}; {2,-6,-2,4,-4,6,0, -4, -4, -4, 0, 0}; {-5, 0, 6, 6, -2, 4, -1, -2, -5, 1, 0, 0}; {-2, 8, -1, 8, -2, -5, -5, 0, 5, 6, 0, 0}; {-2, 8, -1, 8, -2, -5, -5, 0, 4, 6, 0, 0}; {4, -6, 1, 1, -7, 1, -3, -4, -6, 0, 0, 0}; {6, -4, 7, -1, -1, 4, -2, 1, 6, 4, 0, 0}; {5, -2, 7, 3, 8, -2, 5, 7, 6, 6, 0, 0}; {-1, 4, 3, -5, 2, -4, -1, -4, -5, 7, 0, 0}; {3, -5, 6, -5, -1, 1, -7, 3, 2, 1, 0, 0}; {3, 7, -2, -4, 0, -7, 4, -1, -2, 3, 0, 0}; {2, 6, -5, 3, -5, -1, -3, 6, 3, -1, 0, 0}; {-2, 6, 8, 0, -3, 7, 0, 5, 0, -1, 0, 0}; {5, -5, 2, -7, -6, 6, 3, -7, 7, -1, 0, 0}; {-1, 6, 7, -1, -6, -1, 7, 2, 0, 0, 0, 0}; {2, 7, 6, -4, 8, 2, -7, -6, 5, 3, 0, 0}; {3, 7, 2, -5, 0, 7, 8, 2, -1, -4, 0, 0}; {-4, -2, 6, -3, -1, -7, 3, -6, 6, -1, 0, 0}; {2, 7, 6, -4, 8, 2, 8, -6, 5, 4, 0, 0}; {2, 7, 6, -4, 8, 2, 8, -6, 5, 3, 0, 0}; {6, -2, 6, 7, 1, -6, 6, 7, 7, -1, 0, 0}; {6, -2, 6, 7, 1, -6, 6, 7, 7, -2, 0, 0}; {-2, 3, -4, 2, -1, 4, 4, -5, 7, 4, 0, 0}; {5, 3, -2, 8, 7, -3, 4, -1, 4, -3, 0, 0}; {1, -7, 0, -7, -3, -5, -3, -2, 8, 8, 0, 0}; {6, -6, 1, 7, 4, 8, 8, -4, 8, 4, 0, 0}; {-7, 1, -7, -7, 3, -5, 8, 8, 7, -1, 0, 0}; {7, -1, -1, -7, 5, -5, 4, -3, 0, 1, 0, 0}; {-7, -1, -6, 2, 1, -7, -7, 1, 3, 0, 0, 0}; {4, -5, 1, 1, -6, 2, -4, -4, -6, 1, 0, 0}; {-5, 8, 1, 8, 2, 7, -2, 0, -5, -4, 0, 0}; {-7, 4, -5, 3, -3, 0, 1, 0, 5, 6, 0, 0}; {-6, -1, 7, -1, -4, 3, 1, 6, 6, 3, 0, 0}; {8, -2, 4, 4, -4, 4, -2, -4, -6, 1, 0, 0}; {-3, 7, -2, 8, -3, -6, -5, -1, 7, 7, 0, 0}; {3, -4, -5, 4, 4, -6, 2, -4, 0, -1, 0, 0}; {-4, 1, -6, 0, 6, 3, -1, 7, 5, -1, 0, 0}; {0, 4, -4, 2, 0, 5, 4, -6, 7, 4, 0, 0}; {-2, 6, 2, 7, -4, -3, 6, 2, 0, 1, 0, 0}; {7, -2, -3, 4, 0, 4, -6, 3, 5, 3, 0, 0}; {7, -2, -3, 4, 0, 4, -6, 3, 5, 2, 0, 0}; {0, 6, -1, 7, 2, 5, 4, 1, -7, -7, 0, 0}; {8, -2, -2, 5, 0, 5, -4, 5, 4, 3, 0, 0}; {-1, 6, -3, -3, 6, -2, -6, -6, -7, -1, 0, 0}; {-6, 2, -7, -2, -6, -7, 8, 5, -6, -6, 0, 0}; {-3, 6, 6, -1, 0, 6, -1, -6, -2, -2, 0, 0}; {3,-5, 1, 1, -6, 1, -4, -5, -6, 1, 0, 0}; {6, -5, 5, -3, 6, 6, -6, -6, 7, 7, 0, 0}; {2, -7, 2, -7, 5, 6, 4, 3, -7, -7, 0, 0}; {-6, 2, -6, 5, -6, -7, -6, -3, 6, 6, 0, 0}; {1, -6, -6, 3, 2, 8, 0, -5, -1, -1, 0, 0}; {1, -6, -6, 3, 2, 8, 0, -5, -1, -2, 0, 0}; {8, -3, 5, -3, -5, 1, 1, 6, 5, 4, 0, 0}; {8, -3, 5, -3, -5, 1, 1, 6, 5, 3, 0, 0}; {8, 4, -4, 6, 3, 7, -3, 6, -7, 0, 0, 0}; {-4, 2, 1, 8, 5, -1, 5, -7, 3, 2, 0, 0}; {7, -3, 6, -2, 7, 6, -7, -6, 7, 7, 0, 0}; {8, -3, 5, 0, 3, -3, -5, 4, -1, -3, 0, 0}; {7, 0, 7, -2, 8, 7, 6, 5, 8, -7, 0, 0}; {-7,5,-3, 7, 4, -7, -3, 6, -7, 1, 0, 0}; {-1, 4, -5, 3, -4, -5, -2, -2, 5, 3, 0, 0}; {-1, 8, -7, 1, 4, 0, -7, -1, -3, -3, 0, 0}; {-6, 4, -3, 7, -5, -7, -6, -2, 5, 6, 0, 0}; {-4, 4, 4, -5, -4, 6, -2, 4, -1, 0, 0, 0}; {-5, 2, -6, -5, 4, -3, -7, 8, 8, -1, 0, 0}; {6, -4, -2, 7, 1, -4, 3, 7, 3, 0, 0, 0}; {6, -4, -2, 7, 1, -4, 3, 7, 2, 0, 0, 0}; {-7, 1, 8, 0, -7, 8, 6, 5, 8, -7, 0, 0}; {8, -3, -1, 8, 2, -2, 3, 8, 3, 0, 0, 0}; {0, 8, 1, 1, 8, 1, 5, 5, 8, 0, 0, 0}; {-2, 5, -5, 5, 5, -3, 3, 0, -5, -3, 0, 0}; {3, -4, -4, 5, 8, 1, -7, 5, -4, -1, 0, 0}; {-4, -6, 5, -3, -4, 2, -7, 3, 8, -1, 0, 0}; {-3, 2, 8, 6, 0, 6, 0, -1, -5, 1, 0, 0}; {-1, 6, 8, 2, -4, -7, 0, 5, 1, -1, 0, 0}; {4, -5, 1, 1, -7, 1, -4, -5, -7, 0, 0, 0}; {4, 1, -5, 2, 1, 7, -3, 6, -5, 1, 0, 0}; {2, -7, -1, 4, -1, -3, -5, 8, -4, -4, 0, 0}; {-2, 6, 5, -3, -6, 0, 6, -1, 3, 1, 0, 0}; {-2, 6, 5, -3, -6, 0, 6, -1, 2, 1, 0, 0}; {-1, 7, -5, 2, -6, 4, -1, -5, -5, -4, 0, 0}; f-4, 6, -2, -7, 6, -5, -3, 7, -7, 1, 0, 0}; {-4, 5, 0, 6, -5, -4, 6, 1, 0, -1, 0, 0}; {-5, 3, -5, 6, -6, -7, -4, -3, 6, 5, 0, 0}; {-7, 1, -7, 4, 8, 8, -6, -4, 6, 6, 0, 0}; {7, -5, 1, 8, 5, -6, 8, -5, -7, 5, 0, 0}; {-4, 3, 5, -1, -6, 7, -2, 3, 0, -1, 0, 0}; {-1, 5, 4, -6, 5, 8, -2, 7, 6, 4, 0, 0}; {-1, 5, 4, -6, 5, 8, -2, 7, 6, 3, 0, 0}; {1, 7, -1, -1, 7, 0, -5, -6, -7, 0, 0, 0}; {-2, 3, -6, 2, -5, -6, -2, -3, 5, 3, 0, 0}; {1, -6, 8, -1, 4, 8, 1, -4, -1, 0, 0, 0}; {5, -7, -1, 7, -1, -1, -2, 7, 3, -2, 0, 0}; {2, -7, 8, -1, -1, -6, 1, 6, 1, 1, 0, 0}; {8, 0, -3, 6, 6, -2, 3, -5, 0, -1, 0, 0}; {3, -3, -2, 8, -6, 1, -6, 7, -4, -3, 0, 0}; {4, -4, 3, 3, -3, 0, 8, 5, -4, -1, 0, 0}; {-3, 4, -5, 0, -2, -5, -7, 7, -4, -6, 0, 0}; {-1, -7, -5, 4, -6, 6, 0, -7, -6, -4, 0, 0}; {-7, 1, 8, 2, 3, -5, -1, -2, -5, -4, 0, 0}; {-6, 2, -5, 4, -7, 8, -6, -4, 7, 7, 0, 0}; {1, -6, -6, 3, 3, -7, 1, -4, 0, -1, 0, 0}; {2, -6, 2, -6, -2, -3, -3, -2, -7, 8, 0, 0}; {-6, 1, 8, -2, -6, -7, 8, 5, -6, -6, 0, 0}; {7, 0, -1, 8, 6, -5, 3, -2, 1, -1, 0, 0}; {5, 0, 6, -3, 5, 7, 6, 4, 8, 8, 0, 0}; {7, -1, 4, 0, 0, -7, 0, -3, -7, -5, 0, 0}; {-3, -7, 3, -3, -2, 2, 7, 2, 6, -1, 0, 0}; {3, -6, 1, 1, -7, 1, -3, -4, -7, 0, 0, 0}; {2, -3, 5, -3, 4, 5, 4, 3, 7, 8, 0, 0}; {-3, 5, -6, 3, 2, -3, 2, -1, -5, -4, 0, 0}; {6, -7, 0, -7, -4, 5, 0, 8, 3, -1, 0, 0}; {-4, 6, 3, -6, 1, 4, -1, -6, -3, -1, 0, 0}; {-4, 3, -5, -1, -6, -5, 8, 5, -5, -5, 0, 0}; {5, 8, -1, -7, -5, 5, -1, 7, 3, -2, 0, 0}; {3, 7, -2, 6, -2, -3, 0, -1, 7, 4, 0, 0}; {-6, 1, -7, -6, 3, -4, 8, -7, 8, -1, 0, 0}; {-6, -1, 5, 5, -3, 4, -1, -2, -5, 1, 0, 0}; {7, -4, 3, -4, 5, -7, -7, 3, 0, -3, 0, 0}; {7, -1, 0, 6, -6, 3, -5, 3, -1, -1, 0, 0}; {3, -4, 4, 4, -5, 2, 7, 7, 7, 0, 0, 0}; {3, -7, 1, -7, -7, -1, -1, 4, 4, 2, 0, 0}; {4, -1, 6, -4, 5, 6, 6, 4, 8, 8, 0, 0}; {8, 2, 1, 8, -2, 3, -4, 8, -3, -1, 0, 0}; {0, 5, -3, 5, -4, -5, -2, -3, -7, 8, 0, 0}; {-5, 5, 2, -7, 0, 3, -3, -6, -3, 0, 0, 0}; {3, -4, -1, 8, 2, -5, -6, -2, 1, 3, 0, 0}; {0, 4, -4, 3, 0, 6, 4, -7, 7, 5, 0, 0}; {7, 4, -6, 4, -5, 6, 8, -3, 6, 7, 0, 0}; {-7, 0, 0, -7, 6, -4, 4, -3, 1, 1, 0, 0}; {-4, 5, 6, -1, 2, -2, 8, -2, -4, -3, 0, 0}; {2, -4, 3, -4, 2, 5, 5, 3, 7, 7, 0, 0}; {4, 0, -7, 3, 1, 6, -5, 4, 8, 0, 0, 0}; {-7, 1, -2, 4, 8, -4, 5, -1, 1, 1, 0, 0}; {-6, -1, 6, 6, -3, 5, -1, -4, -5, 1, 0, 0}; {-3, 6, 0, 0, 6, -1, 4, 5, 7, 0, 0, 0}; {3, -5, 1, 2, -6, 0, -4, -5, -7, 0, 0, 0}; {1, -5, -4, 6, -7, -1, -7, 6, -5, -3, 0, 0}; {-6, 1, 1, -5, 4, -7, 4, 0, 1, -3, 0, 0}; {0, 8, -1, -1, 8, 0, -5, -6, -7, 1, 0, 0}; {-4, 0, 7, -2, -1, -6, 5, -5, 7, 0, 0, 0}; {-3, 5, -3, 7, -5, -6, -4, -3, 7, 6, 0, 0}; {-2, 7, 1, 0, 8, 0, 5, 5, 7, 0, 0, 0}; {-6, 4, 2, -7, -1, 4, -3, -7, -2, 0, 0, 0}; {-6, 4, 2, -7, -1, 4, -3, -7, -3, 0, 0, 0}; {1, 8, 7, 0, -6, -2, 7, 2, 2, -1, 0, 0}; {0, 8, 4, -5, -3, 1, -7, 1, 3, 1, 0, 0}; {6, -3, 4, -3, 1, -1, -1, 0, -7, 8, 0, 0}; {-4, 0, 3, -5, 4, -1, 5, -7, 5, 2, 0, 0}; {-7, 8, 1, -5, -6, 0, 7, 2, 7, -1, 0, 0}; {-1, 3, -4, 2, -1, 4, 5, -5, 7, 4, 0, 0}; {-6, 0, 0, 6, 2, 5, -4, 5, 5, 3, 0, 0}; {-4, 5, -1, 8, -4, 3, -7, -7, 8, -7, 0, 0}; {-5, 8, 6, -2, 6, -6, 2, 8, 7, -3, 0, 0}; {6, 3, -3, 4, 2, -7, -2, 7, -4, 1, 0, 0}; {8, -2, -2, 5, 2, -3, 4, 7, 3, 1, 0, 0}; {8, -1, 5, 4, -3, 4, -2, -3, -5, 1, 0, 0}; {2, 2, -1, -1, 7, -2, 6, 2, -6, -5, 0, 0}; {5, 1, 3, -2, 2, -7, 4, 3, -7, -5, 0, 0}; {3, -7, 2, -7, 4, 6, 5, 2, -7, -7, 0, 0}; {7, 4, 1, -6, 4, -5, 3, 7, -6, -1, 0, 0}; {3, -7, 2, -7, 3, 6, 5, 1, -5, -6, 0, 0}; {-2, 3, -7, 7, 0, 6, 1, -2, -3, 2, 0, 0}; {3, 8, 2, -7, 8, -1, -3, 4, 5, 2, 0, 0}; {-1, 8, -3, 3, -4, -4, -6, 7, -6, -6, 0, 0}; {2, -7, 0, 0, -7, 0, -4, -5, -7, 0, 0, 0}; {7, 0, 7, 1, 2, -6, -1, -3, -6, -4, 0, 0}; {8, 6, 0, -1, 6, -6, 1, -6, 1, -2, 0, 0}; {-7, -1, -1, 6, 1, 5, -4, 6, 3, 3, 0, 0}; {7, -3, 6, -2, 6, 6, -6, -6, 7, 7, 0, 0}; {2, -6, 2, -5, 2, 5, 6, 3, 6, 7, 0, 0}; {0, -6, -7, 2, 2, -7, 0, -6, -1, -2, 0, 0}; {4, -3, 7, 6, -4, -3, 1, 6, 2, 3, 0, 0}; {-1, 8, 4, -7, -2, 0, 8, 1, 2, -1, 0, 0}; {-5, 0, 6, 6, -2, 5, -1, -2, -5, 1, 0, 0}; {3, -5, 3, -2, -1, 8, -3, -5, -7, -4, 0, 0}; {4, -3, 3, -6, 5, 7, 7, 3, 8, 8, 0, 0}; {0, 4, 7, -1, 6, 3, -7, 6, 8, 3, 0, 0}; {7, 0, -2, 7, 6, -3, 3, -4, 0, -1, 0, 0}; {-5, -2, 7, -5, 0, -6, 5, -5, 8, 0, 0, 0}; {3, 1, -7, 2, 0, 6, -3, 6, -6, 1, 0, 0}; {5, -3, -3, 5, 7, 2, -5, 1, -2, -1, 0, 0}; {4, -4, 5, 6, -1, 8, 6, 7, 6, -2, 0, 0}; {-5, 2, 3, -7, 6, -2, 6, -6, 4, 1, 0, 0}; {4, -5, 2, -5, -2, -3, -1, -1, -7, 8, 0, 0}; {1, -4, 6, 7, 0, -7, -1, 1, 4, -1, 0, 0}; {7, 3, -6, 4, -6, 7, 8, -3, 5, 6, 0, 0}; {-2, 6, 6, -4, -2, 8, -1, 6, 1, 0, 0, 0}; {-6, 3, 2, -6, -5, 6, -2, 4, -1, 0, 0, 0}; {2, -1, 8, 1, 3, -5, 3, 7, 7, -1, 0, 0}; {7, -1, -7, -3, 1, 3, -5, 5, 3, 1, 0, 0}; {1, -5, 3, -7, 3, 1, 6, 8, -1, 1, 0, 0}; {-4, 2, 8, 7, 0, 6, 0, -2, -4, 2, 0, 0}; {-6, -3, 5, -4, -2, -7, 3, -6, 7, -1, 0, 0}; {-5, 5, 7, 1, 6, 3, -1, 6, -6, -5, 0, 0}; {0, 5, -6, -6, 1, 8, 2, -1, -4, 2, 0, 0}; {8, 0, 1, 8, -6, 4, -4, 5, -1, 0, 0, 0}; {-4, 4, -3, 4, 2, 3, 2, 0, 7, 8, 0, 0}; {-7, -4, 3, -7, 5, -6, 7, -4, -7, 5, 0, 0}; {8, 0, 8, 3, 8, 7, -6, -4, 6, 6, 0, 0}; {8, 0, 8, 3, 8, 7, -6, -4, 5, 5, 0, 0}; {0, 5, 7, -1, 7, 3, 8, -7, 6, 2, 0, 0}; {-1, 7, -5, 1, -7, 4, -1, -5, -5, -4, 0, 0}; {-2, -6, -2, -7, -2, 4, 1, 1, 6, 8, 0, 0}; {8, 0, 8, 8, -3, 5, -7, 8, -7, 1, 0, 0}; {3, 7, -2, 8, -6, 3, -1, 7, 2, -1, 0, 0}; {0, 4, -6, 0, 2, -3, 7, -3, -7, 1, 0, 0}; {0, -4, 6, 0, -2, 3, -7, 3, 7, -1, 0, 0}; {-7, -2, 5, 4, -3, 4, -2, -2, -5, 1, 0, 0}; {-3, 6, 7, -1, 3, -2, 7, -1, -4, -2, 0, 0}; {-4, -1, 7, -3, -1, -6, 4, -5, 7, 0, 0, 0}; {7, -2, -1, 7, -7, 3, -5, 5, -2, 0, 0, 0}; {0, -7, 2, 3, -5, -6, 2, 6, 1, -1, 0, 0}; {-7, 3, -7, -1, 8, -7, 7, 5, -7, -6, 0, 0}; {6, 2, 0, -7, 2, 8, 3, 4, 8, -3, 0, 0}; {5, -7, 0, -7, -5, 6, 0, 8, 5, -2, 0, 0}; {-3, -2, -5, -4, 5, -4, 5, 0, -7, -6, 0, 0}; {-5, 2, 5, -1, -7, 7, -3, 2, 1, 2, 0, 0}; {-2, 6, -2, 5, 6, 3, 3, 2, -7, -7, 0, 0}; {3, -7, 6, -4, -6, 3, -7, -5, 6, 4, 0, 0}; {-7, 2, -7, -2, -7, -6, 7, 5, -6, -6, 0, 0}; {7, -6, 3, 8, -3, 8, 3, -6, 7, 0, 0, 0}; {-6, 2, 2, -5, 7, -4, 4, -1, 1, 1, 0, 0}; {-6, 2, 2, -5, 7, -4, 4, -1, 1, 0, 0, 0}; {4, -6, 4, -4, 4, 5, -7, -7, 6, 6, 0, 0}; {8, 1, -7, 8, -1, 6, -7, 8, -7, 2, 0, 0}; {-3, 7, -1, 6, 0, 2, 3, 2, 6, 7, 0, 0}; {-5, 5, -2, -2, 7, -2, 3, 4, 6, 0, 0, 0}; {-5, -7, 3, -3, -5, 1, 7, 2, 6, -2, 0, 0}; {4, -3, 4, -4, 0, -2, -2, 0, -7, 8, 0, 0}; {6, -2, 7, 8, 1, -6, 7, 8, 7, -1, 0, 0}; {-7, -4, 4, -7, -2, -7, 4, -5, 8, 0, 0, 0}; {6, -3, 5, -2, 0, -2, -2, 1, -6, -7, 0, 0}; {-1, 8, 1, -7, 0, 4, 5, 2, 6, 7, 0, 0}; {5, -2, -2, 7, 5, -5, 3, -3, 0, 0, 0, 0}; {4, -3, 5, -6, 5, 6, 5, 3, -7, -6, 0, 0}; {-1, 7, 0, 7, 3, 4, 3, 2, 8, -7, 0, 0}; {-1, 6, -3, -3, 6, -2, -6, -7, 8, -1, 0, 0}; {-5, 4, 2, -5, -1, 5, -3, -7, -2, 0, 0, 0}; {0, 4, 5, 8, 3, -4, 7, 7, 2, 6, 0, 0}; {2, -5, 3, -7, 5, 6, 3, 3, -7, -6, 0, 0}; {-2, 2, -6, 2, -1, 5, 3, 7, 7, 4, 0, 0}; {3, -6, -7, 1, -3, 1, 8, 2, 4, 1, 0, 0}; {-3, 4, -4, -3, 5, -3, -6, -6, 8, 0, 0, 0}; {-3, 4, -4, -3, 5, -3, -6, -6, 8, -1, 0, 0}; {-2, 7, 7, 0, 3, 0, -7, -1, -4, -2, 0, 0}; {5, -5, 2, 1, -5, 2, -4, -4, -5, 1, 0, 0}; {1, 8, 8, -2, -1, -7, 1, 8, 2, 2, 0, 0}; {-6, 4, 3, -4, 0, 5, -2, -6, -2, -2, 0, 0}; {7, 1, 0, -7, -2, 4, -4, -7, -2, -1, 0, 0}; {8, -2, -1, 8, 2, -3, 4, 8, 3, 1, 0, 0}; {-4, 3, 3, -5, -5, 6, -2, 4, -1, 0, 0, 0}; {1, -7, 2, -7, 4, 5, 3, 2, -6, -6, 0, 0}; {7, -1, 7, -2, 2, -1, -1, 0, -6, -7, 0, 0}; {-6, 7, -5, 7, -5, 3, -2, 0, 6, -7, 0, 0}; {-5, -1, -2, 2, -5, -2, 6, -3, -7, 6, 0, 0}; {0, 7, 7, -1, -5, 0, 8, 1, 2, 2, 0, 0}; {6, -2, 7, 2, 7, 7, 8, -5, 6, 6, 0, 0}; {0, 3, 8, -1, -5, -1, -4, -3, -5, 6, 0, 0}; {-3, 7, 7, 0, 4, -2, 7, -2, -3, -1, 0, 0}; {2, -3, 7, -7, 0, -6, -1, 2, 3, -2, 0, 0}; {6, 1, -5, 4, 2, 7, -5, 5, 8, 0, 0, 0}; {0, -7, 1, -6, -2, -4, -4, -1, 8, 8, 0, 0}; {5, 0, 0, -7, 1, 6, 2, 5, 5, -5, 0, 0}; {-3, 2, -7, 1, -6, -6, -3, -3, 5, 3, 0, 0}; {5, -1, 7, -3, 5, 7, 6, 4, 8, 8, 0, 0}; {-1, 7, -2, 7, 1, 3, 4, 2, 6, 7, 0, 0}; {8, 0, 0, 8, -7, 5, -3, 2, -1, -1, 0, 0}; {7, 6, 0, -6, -7, -1, 6, 1, 6, -2, 0, 0}; {3, -6, 2, -7, 4, 6, 6, 2, -7, -7, 0, 0}; {1, -6, 0, 8, 3, 6, 5, 2, 8, 8, 0, 0}; {4, -3, 2, -7, 1, -2, -5, -7, -6, -5, 0, 0}; {8, -2, 4, 4, -3, 4, -1, -4, -5, 1, 0, 0}; {-4, 6, -1, 5, -1, 1, 3, 1, 6, 7, 0, 0}; {-4, 8, 1, 7, 5, -4, 0, 8, -2, 1, 0, 0}; {-5, 1, 7, 7, -2, 5, 0, -2, -5, 1, 0, 0}; {-4, 6, 6, -1, 3, -2, 7, -2, -4, -2, 0, 0}; {3, -4, 4, -2, 0, 7, -4, -5, -7, -6, 0, 0}; {6, -1, 5, 1, -3, -4, 4, -6, -3, -2, 0, 0}; {0, -7, 1, 8, 2, 4, 4, 2, 8, 8, 0, 0}; {7, -4, 3, -4, 6, 8, 8, 2, -1, -4, 0, 0}; {4, -3, -3, 6, 4, -6, 3, -4, 0, 0, 0, 0}; {5, -5, -5, 3, -4, 1, -6, 4, 3, 1, 0, 0}; and {4, -1, 2, -4, 3, 0, -4, 5, 8, -5, 0, 0}.

When M=16, the first sequence set may further include some or all of the following 3737 sequences (which are marked as Seq16psk_lte_idc_high). PAPRs of sequences corresponding to these sequences are less than 2.0 dB, but a value of a cross-correlation with an LTE sequence is relatively large. These sequences belong to suboptimal sequences. The 3737 sequences are as follows:

{-3, 5, -3, 5, -3, -4, 6, 5, -1, -1, 0, 0}; {5, -3, 5, -3, 6, 6, -6, -4, 2, 3, 0, 0}; {-5, 2, -7, 0, 8, 7, -4, -5, 4, 2, 0, 0}; {3, -5, 3, -5, 4, 4, -5, -3, 1, 2, 0, 0}; {-7, 1, -7, 1, -5, -6, 4, 4, -3, -2, 0, 0}; {8, 0, 8, 0, -5, 7, 5, -2, 0, 2, 0, 0}; {8, 0, 8, 0, -5, 7, 6, -4, -1, 2, 0, 0}; {7, -2, 5, -4, 6, 7, 7, 2, -2, -5, 0, 0}; {-2, 6, -2, 6, 1, 4, 4, 2, 7, 8, 0, 0}; {-3, 5, -3, 5, 0, 3, 4, 1, 6, 7, 0, 0}; {6, -2, 6, -2, -6, 6, 4, -3, 0, 2, 0, 0}; {-1, 7, -1, 7, 3, 4, 3, 2, 8, -7, 0, 0}; {-4, 4, -4, 4, 0, 2, 2, 0, -7, -7, 0, 0}; {6, -3, 4, -5, 6, 7, 7, 4, -7, -7, 0, 0}; {6, -3, 4, -5, 7, 7, 7, 4, -7, -7, 0, 0}; {-5, 3, -5, 3, 0, 2, 1, 1, 7, 8, 0, 0}; {0, -7, 2, -5, -7, -4, -3, -3, 4, 6, 0, 0}; {4, -5, 2, -7, 5, 6, 6, 3, -7, -7, 0, 0}; {-4, 5, -2, 7, 6, -6, -3, 7, 8, 1, 0, 0}; {5, -3, 5, -3, -4, 4, 0, 2, 5, 4, 0, 0}; {8, -1, 6, -3, -5, 2, 0, 5, 5, 2, 0, 0}; {0, 7, -2, 5, 3, -5, -7, 3, 1, 0, 0, 0}; {8, 2, -4, 6, 8, 1, 4, -6, -2, -2, 0, 0}; {3, -3, 7, 1, 3, -4, 0, -7, -5, -3, 0, 0}; {6, 0, -6, 4, 6, -1, 3, -7, -3, -2, 0, 0}; {2, 8, -2, 4, 2, 8, 4, 8, 7, 3, 0, 0}; {8, -2, 4, -6, 8, -1, -4, 6, 2, 2, 0, 0}; {0, -7, 2, -5, -3, 5, 7, -3, -1, 0, 0, 0}; {-6, 2, -6, 2, 3, -6, -5, 1, 1, 2, 0, 0}; {8, 1, -6, 3, 5, -2, 0, -5, -5, -2, 0, 0}; {-7, 2, -5, 4, 7, -7, -7, -5, 7, 6, 0, 0}; {4, -5, 2, -7, -6, 0, -1, 5, 3, 1, 0, 0}; {8, 1, -6, 3, 7, 8, 8, -5, 7, 6, 0, 0}; {1, -7, 1, -7, -4, -4, -3, -2, 8, 6, 0, 0}; {0,8,0, 8, -5, -5, -4, -2, 8, 7, 0, 0}; {-3, 5, -3, 5, 8, 8, -4, -4, 5, 5, 0, 0}; {1, -7, 1, -7, -3, -4, -3, -2, 8, 7, 0, 0}; {-5, 3, -5, 3, 7, -5, -4, 4, 1, -1, 0, 0}; {1, -7, 1, -7, -2, -4, -4, -2, -7, 8, 0, 0}; {8, 0, 8, 0, 5, 7, -4, -4, 4, 2, 0, 0}; {6, -2, 6, -2, 4, 6, -4, -3, 2, 1, 0, 0}; {5, -3, 5, -3, 4, 4, -5, -4, 1, 2, 0, 0}; {5,-2, 7, 0, 8, -7, 4, 5, -4, -2, 0, 0}; {-5, 3, -5, 3, -6, -6, 6, 4, -2, -3, 0, 0}; {5, -3, 5, -3, 4, 5, -5, -4, 2, 2, 0, 0}; {-5, 3, -5, 4, -5, -7, 8, -5, -7, 7, 0, 0}; {2, -6, 2, -5, 2, 3, -6, -5, 1, 1, 0, 0}; {-7, 1, -7, 2, -5, 8, 7, -3, 0, 3, 0, 0}; {4, -5, 2, -6, 2, 0, -7, 7, 1, 0, 0, 0}; {-4, 3, -6, 2, -6, -7, -3, -3, 4, 3, 0, 0}; {-4, 3, -6, 2, -6, -7, -2, -2, 4, 3, 0, 0}; {-5, 2, -7, 1, -7, 8, -3, -3, 4, 3, 0, 0}; {-4, 3, -6, 2, -6, -7, -1, -1, 4, 3, 0, 0}; {0, 8, 0, -7, 2, 2, -7, -5, 0, 1, 0, 0}; {8, 0, 8, 1, -6, -6, 5, 5, -3, -2, 0, 0}; {-7, 0, 7, -1, 7, -7, -6, 3, 0, -3, 0, 0}; {3, -6, 1, -7, 2, -1, 8, 7, 0, 0, 0, 0}; {7, -2, 5, -3, 7, 8, 7, 3, -2, -4, 0, 0}; {6, -3, 4, -4, 6, 7, 7, 2, -2, -4, 0, 0}; {-6, 2, -6, 3, -1, 2, 2, 1, 6, 7, 0, 0}; {-7, 1, -7, 2, -2, 1, 1, 0, 6, 7, 0, 0}; {1, 8, -1, 7, 3, 4, 5, 2, 8, 8, 0, 0}; {0, 7, -2, 6, 2, 4, 4, 1, -4, -6, 0, 0}; {5, -4, 3, -5, 7, 7, 6, 5, -7, -7, 0, 0}; {-6, 2, -6, 3, 0, 1, 1, 1, 6, 8, 0, 0}; {-7, -1, 5, -4, 8, 8, 8, 4, -2, -5, 0, 0}; {4, -4, 4, -3, -5, -2, -2, -2, 8, 8, 0, 0}; {0, -7, 2, -4, -3, 5, 7, -4, 0, -1, 0, 0}; {1, 8, -1, 7, 6, -2, -5, 2, 3, 1, 0, 0}; {6, -1, 8, 2, 3, -3, -1, -6, -5, -3, 0, 0}; {-5, 3, -5, 4, 4, -3, 0, -2, -5, -4, 0, 0}; {-1, 3, 7, -4, -7, 4, -1, 2, -2, 3, 0, 0}; {8, 1, -6, 4, 7, -7, -7, -5, 6, 6, 0, 0}; {-1, 8, 1, -5, -2, 4, -5, -5, -7, -6, 0, 0}; {4, -3, 6, 0, 4, 6, 7, -6, 6, 5, 0, 0}; {-4, 4, -4, 5, 8, -7, -6, -3, 7, 6, 0, 0}; {-2, 7, 0, -6, -2, 3, -5, -5, -7, -6, 0, 0}; {-1, 7, -1, 8, -4, -5, -4, -2, 7, 7, 0, 0}; {-3, 5, -3, 6, -6, -7, -5, -3, 7, 7, 0, 0}; {-4, 4, -4, 5, -7, 8, -5, -4, 7, 7, 0, 0}; {-5, 3, -5, 4, 8, 8, -5, -4, 6, 6, 0, 0}; {-3, 6, -1, -7, -2, 2, -5, -5, -7, -6, 0, 0}; {1, 8, -1, 7, -6, -2, -2, 6, 3, -1, 0, 0}; {-2, 6, -2, 7, -4, -5, -5, -3, 8, 7, 0, 0}; {-2, 6, -2, 7, -4, -5, -4, -2, 5, 5, 0, 0}; {-6, 2, -6, 3, 8, 8, -5, -4, 4, 4, 0, 0}; {1, 8, -1, 7,

-5, -5, 0, -1, 6, 4, 0, 0}; {5, -3, 5, -2, 3, 5, -5, -5, 3, 2, 0, 0}; {-2, 6, -2, 7, -3, -6, -6, -3, -7, 8, 0, 0}; {-2, 5, -4, 4, -7, -7, -1, -2, 5, 3, 0, 0}; {4, -4, 4, -3, 3, 5, -5, -5, 3, 2, 0, 0}; {-5, 3, -5, 5, -5, -7, -7, -4, 8, 7, 0, 0}; {0, 8, 0, -6, 0, 2, -7, -7, 2, 1, 0, 0}; {-3, 4, -5, 4, -7, -4, -3, 5, 2, -1, 0, 0}; {8, 0, 8, 2, -6, 8, 7, -3, 1, 3, 0, 0}; {-2, 6, -2, 8, 0, 1, 7, 8, 1, 2, 0, 0}; {-6, 1, 8, 1, 8, 8, -2, -2, 3, 2, 0, 0}; {0, 7, -2, 7, -1, -5, -6, -3, -7, 8, 0, 0}; {2, 8, -2, 6, -3, -5, 1, 0, 5, 3, 0, 0}; {7, -2, 5, -2, 6, 6, -3, -3, 2, 1, 0, 0}; {4, -4, 4, -2, -5, -1, -1, -1, 5, 6, 0, 0}; {3, -6, 1, -6, 6, -2, -1, 5, 3, 1, 0, 0}; {6, -1, 8, 3, 3, -3, 0, -6, -5, -3, 0, 0}; {6, -1, 8, 3, 3, -3, 1, -6, -5, -2, 0, 0}; {-2, 4, -6, 2, 0, 6, 4, 6, 7, 5, 0, 0}; {-3, 3, -7, 1, -1, 5, 3, 6, 6, 5, 0, 0}; {1, 8, -1, 8, -7, -5, 4, 2, -3, -5, 0, 0}; {8, -1, 6, -1, 1, 0, 0, 1, -6, 8, 0, 0}; {-6, 2, -6, 4, 7, 8, -6, -4, 6, 6, 0, 0}; {3, -4, 5, 0, 4, 6, 7, -6, 5, 5, 0, 0}; {-5, 3, -5, 5, -7, -7, -5, -4, 6, 6, 0, 0}; f 4, -5, 2, -5, -2, -3, -1, -1, 8, 7, 0, 0}; {-7, 1, -7, 3, 8, 8, -6, -4, 5, 5, 0, 0}; {5, -3, 5, -1, 4, 4, -6, -5, 3, 3, 0, 0}; {-1, 6, -3, 6, -6, -6, -1, -2, 6, 4, 0, 0}; {2, -6, 2, -4, 1, 3, -6, -6, 2, 2, 0, 0}; {1, -7, 1, -5, 0, 3, -6, -6, 2, 1, 0, 0}; {-4, 3, -6, 3, 7, -4, -4, 4, 1, -2, 0, 0}; {7, -1, 7, 2, 8, 7, 8, -5, 6, 6, 0, 0}; {5, -5, 1, -6, -2, -3, 2, 0, 8, 5, 0, 0}; {8, -1, 6, 0, 5, 6, -3, -4, 4, 2, 0, 0}; {-4, 4, -4, 7, -3, 0, 8, 8, 1, 0, 0, 0}; {1, 8, -1, -7, -1, -4, -5, -2, -7, 8, 0, 0}; {6, -2, 6, 1, 8, 6, 7, -6, 7, 6, 0, 0}; {8, -1, 6, 0, 6, 6, -4, -4, 4, 3, 0, 0}; {1, 7, -3, 6, -5, -5, 1, 0, 6, 3, 0, 0}; {1, 7, -3, 6, -4, -5, 0, -1, 6, 4, 0, 0}; {8, -2, 4, -3, 4, -1, -3, -1, -5, -7, 0, 0}; {-3, 3, -7, 2, -6, -5, -3, 4, 2, -1, 0, 0}; {4, -5, 2, -4, 5, 4, -5, -3, 1, 1, 0, 0}; {-2, 4, -6, 3, -5, -6, 0, 0, 4, 2, 0, 0}; {-3, 3, -7, 2, -6, -7, -1, -1, 4, 2, 0, 0}; {7, -4, 1, -7, 0, -2, 4, 3, 6, 3, 0, 0}; {0, 7, -2, 8, 3, 2, -7, -3, 0, 1, 0, 0}; {3, -4, 5, 1, 1, -5, -1, -7, -6, -3, 0, 0}; {4, -7, -2, 6, 2, -7, 5, -7, 7, 4, 0, 0}; {-2, 5, -4, 6, 5, -3, 1, 0, -4, -3, 0, 0}; {7, -3, 3, -4, -6, 2, 5, 3, -2, -2, 0, 0}; {4,-7,-2, 6, 4, -7, 7, 8, -7, 5, 0, 0}; {-4, 3, -6, 4, 4, -4, 1, -1, -5, -4, 0, 0}; {8, 0, 8, 3, 6, 7, -7, -4, 6, 6, 0, 0}; {-7, -1, 5, -1, 8, 6, -3, -1, 2, 2, 0, 0}; {5, -5, 1, -5, -7, 0, 4, 2, -2, -3, 0, 0}; {-3, 1, 5, -3, -7, -1, -5, -5, -5, 5, 0, 0}; {-3, 3, -7, 4, -3, -5, 7, -1, 2, 2, 0, 0}; {-1, 3, 7, 0, 8, 4, -2, 6, 6, 3, 0, 0}; {3, -5, 3, 1, 5, -1, 4, 7, 7, 7, 0, 0}; {0, -6, 4, 4, -5, -5, 0, 5, 0, 1, 0, 0}; {5, -1, -7, -7, 2, -5, 0, 2, 5, -1, 0, 0}; {8, -3, 2, -3, 4, 2, -4, 4, 4, 4, 0, 0}; {-3, 1, 5, -1, 7, 3, -3, 5, 6, 4, 0, 0}; {1, 4, 7, 0, 8, 4, -2, 6, 8, 3, 0, 0}; {3, -2, -7, -5, 3, 4, -5, 1, -3, -2, 0, 0}; {-5, 5, -1, 0, 8, 8, -1, 4, -1, -1, 0, 0}; {-6, 3, -4, -4, 5, -2, 2, 4, 6, -1, 0, 0}; {8, 1, -6, -6, 3, -3, 1, 2, 6, -1, 0, 0}; {-5, -1, 3, -2, 3, -6, 6, 1, 7, 4, 0, 0}; {5, -6, -1, -5, 2, 1, -6, 3, 3, 3, 0, 0}; {-7, -4, -1, -7, -2, -5, 2, -6, 8, 5, 0, 0}; {-7, -1, 5, 2, -5, -6, 4, -3, 1, 1, 0, 0}; {-2, 2, 6, 1, 8, 5, -3, 6, 5, 4, 0, 0}; {-3, 1, 5, 0, 7, 5, -3, 5, 6, 3, 0, 0}; {1, 6, -5, 7, -1, -2, 7, 1, 3, 2, 0, 0}; {3, 6, -7, 3, -6, 6, -1, 7, 8, 5, 0, 0}; {2, 5, 8, 2, -7, 6, -2, 7, 8, 4, 0, 0}; {-7, -5, -3, 6, -3, -7, 1, -7, -6, 5, 0, 0}; {6, 4, 2, 8, 2, 6, -2, 6, 7, -6, 0, 0}; {6, 4, 2, 8, 2, 7, -2, 6, 6, -5, 0, 0}; {6, 4, 2, 8, 2, 7, -1, 6, 7, -6, 0, 0}; {-1, -4, -7, -2, 7, -5, 2, -7, -7, -4, 0, 0}; {8, 4, 0, 4, -4, -1, 6, -3, -5, -3, 0, 0}; {-7, 5, 1, 5, -2, -2, 5, -4, -4, -4, 0, 0}; {7, 3, -1, 3, -4, -3, 4, -5, -4, -4, 0, 0}; {6, 2, -2, 2, -5, -3, 5, -4, -6, -4, 0, 0}; {6, 2, -2, 2, -5, -3, 5, -4, -5, -3, 0, 0}; {-5, 8, 5, -6, 4, 7, 0, 8, -7, -5, 0, 0}; {4, 0, -4, 0, -6, -5, 4, -5, -5, -4, 0, 0}; {2,-2, -6, -2, 8, -6, 2, -7, -4, -4, 0, 0}; {8, 2, -4, -2, 6, 6, -2, 3, -1, -2, 0, 0}; {-5, 8, 5, -6,

7, 1, 6, -4, 7, -5, 0, 0}; {5, 8, -5, 6, -7, -1, -6, 4, -7, 5, 0, 0}; {-2, 5, -4, -5, 4, 5, -2, -6, -1, 0, 0, 0}; {8, -2, 4, 2, -6, -6, 2, -3, 1, 2, 0, 0}; {8, -2, 4, 2, -6, -6, 3, -3, 1, 1, 0, 0}; {8, -5, -2, -7, -2, -5, 2, -6, 7, 5, 0, 0}; {-4, 0, 4, 0, 6, 5, -4, 5, 5, 4, 0, 0}; {3, 8, -3, -6, 2, -1, -7, 2, 3, 1, 0, 0}; {5, 8, -5, 6, -4, -7, 0, 8, 7, 5, 0, 0}; {-6, -2, 2, -2, 5, 3, -5, 4, 5, 3, 0, 0}; {-6, -2, 2, -2, 5, 3, -5, 4, 6, 4, 0, 0}; {4, 7, -6, 5, -5, 8, -1, 8, 7, 5, 0, 0}; {4, 7, -6, 5, -5, -7, 0, 8, 7, 5, 0, 0}; {3, 6, -7, 4, -6, 8, 0, 8, 7, 5, 0, 0}; {7, -5, -1, -5, 2, 2, -5, 4, 4, 4, 0, 0}; {3, 0, -3, 2, 2, -3, 3, -7, 5, -6, 0, 0}; {8, -4, 0, -4, 4, 1, -6, 3, 5, 3, 0, 0}; {1, 4, 7, 2, -7, 5, -2, 7, 7, 4, 0, 0}; {-6, -4, -2, 8, -2, -7, 1, -6, -7, 6, 0, 0}; {-1, 2, 5, 0, 7, 4, -3, 6, 7, 4, 0, 0}; {0, 1, 2, -5, 1, -4, 4, -4, -5, 6, 0, 0}; {8, 6, 4, -5, 4, 8, -1, 7, 6, -4, 0, 0}; {0, -3, -6, 0, -7, -4, 3, -6, 8, -3, 0, 0}; {-3, -6, 7, -3, 6, -6, 1, -7, 8, -5, 0, 0}; {-1, -6, 5, -7, 1, 2, -7, -1, -3, -2, 0, 0}; {4, 0, -4, 1, -6, -4, 4, -5, -6, -3, 0, 0}; {-2, -7, 4, 8, 0, 1, 8, -1, -3, -2, 0, 0}; f 4, 0, -4, 1, -6, -3, 3, -5, -6, -4, 0, 0}; {-3, 8, 3, 7, -1, 1, 7, -2, -3, -2, 0, 0}; {7, 1, -5, -2, 5, 6, -4, 3, -1, -1, 0, 0}; {7, 4, 1, 7, 2, 5, -2, 6, 8, -5, 0, 0}; {5, -1, -7, -4, 4, 4, -5, 1, -1, -2, 0, 0}; {5, 1, -3, 2, -3, 6, -6, -1, -7, -4, 0, 0}; {-3, 2, 7, 5, -3, -4, 5, -1, 3, 2, 0, 0}; {1, 7, -3, -4, 5, 6, -1, -6, 0, 0, 0, 0}; {-1, 2, 5, 1, 8, 4, -3, 6, 7, 4, 0, 0}; {-1, -4, -7, 0, 8, -4, 2, -6, 8, -3, 0, 0}; {5, 1, -3, 3, -5, -2, 5, -5, -6, -2, 0, 0}; {4, 0, -4, 2, -6, -3, 4, -5, -6, -3, 0, 0}; {3, -1, -5, 1, -7, -3, 3, -5, -6, -4, 0, 0}; {1, -3, -7, -1, 8, -5, 2, -6, -6, -3, 0, 0}; {8, 3, -2, 3, -4, -2, 4, -4, -4, -4, 0, 0}; {1, 7, -3, -3, 6, 6, 0, -5, 0, -1, 0, 0}; {0, 6, -4, -4, 5, 5, 0, -5, 0, -1, 0, 0}; {1, -3, -7, 0, 8, -4, 2, -6, -6, -3, 0, 0}; {-6, 5, 0, 6, -3, 0, 6, -3, -4, -2, 0, 0}; {7, 2, -3, 4, 3, -4, -1, -7, -4, 0, 0, 0}; {4, -4, 4, 8, 5, -4, 8, 6, 7, 7, 0, 0}; {8, 1, -6, -1, -1, 6, 1, 3, 6, 4, 0, 0}; {6, -1, 8, -3, -3, 5, 0, 2, 5, 4, 0, 0}; {-5, 5, -1, 5, 7, 0, -4, -2, 2, 3, 0, 0}; {7, 1, -5, 1, 8, 8, 4, -2, -1, 1, 0, 0}; {5, -3, 5, -6, 5, 6, 6, 5, 3, -6, -6, 0, 0}; {8, -2, 4, 7, 1, 0, -3, -7, -2, -3, 0, 0}; {-3, 5, -3, 2, 1, 8, 3, 5, 7, 4, 0, 0}; {-2, 6, -2, 3, 2, -6, 4, 5, 7, 6, 0, 0}; {-4, 7, 2, -6, -4, 7, -7, 8, 7, -5, 0, 0}; {2, -5, 4, -6, -5, 3, -1, 0, 4, 3, 0, 0}; {-3, 4, -5, -1, -1, 5, 0, 7, 6, 2, 0, 0}; {-3, 4, -5, -1, -1, 5, 1, 7, 6, 3, 0, 0}; {-2, 7, 0, 6, -6, -3, 5, 1, -2, -1, 0, 0}; {0, -5, 6, -2, 4, 3, 4, -5, -1, 3, 0, 0}; {-6, 4, -2, 5, -5, 8, 8, -2, 1, 4, 0, 0}; {8, 2, -4, 3, -7, 7, 8, -3, 1, 4, 0, 0}; f 6, 0, -6, 1, 7, 5, 7, -4, 1, 4, 0, 0}; {-4, 5, -2, 4, -6, -5, 6, 4, -2, -2, 0, 0}; {7, 1, -5, 2, -7, 6, 6, -3, 0, 3, 0, 0}; {7, 1, -5, 2, -7, 6, 6, -3, 1, 4, 0, 0}; {6, 0, -6, 1, 8, 6, 6, -3, 0, 4, 0, 0}; {-6, 5, 0, 8, 0, 0, 1, -7, -3, 2, 0, 0}; {1, -5, 5, -4, 4, 5, 0, 1, -5, -3, 0, 0}; {2, -4, 6, -3, 5, 7, 0, 0, -3, -3, 0, 0}; {-4, 5, -2, 4, -5, -4, 5, 3, -1, -1, 0, 0}; {2, -4, 6, -3, 6, 6, 0, 0, -4, -2, 0, 0}; {-1, -7, 3, -6, 3, 5, -1, 0, -5, -4, 0, 0}; {-1, -7, 3, -6, 4, 5, 0, 1, -6, -4, 0, 0}; {2, -5, 4, -6, 3, 6, 7, 4, 7, -7, 0, 0}; {-2, 8, 2, -7, 4, 5, -1, 0, -6, -4, 0, 0}; {-5, 3, -5, 0, -7, -7, -7, 3, -1, -4, 0, 0}; {0, -7, 2, 8, 2, 5, 6, 3, 7, 8, 0, 0}; {0, -7, 2, 8, 2, 6, 6, 3, 7, 8, 0, 0}; {4, -4, 4, -7, 3, 0, 8, 8, -1, 0, 0, 0}; {-5, 5, -1, 6, 2, 3, -2, 0, 8, -5, 0, 0}; {-2, 7, 0, 6, 1, 3, 4, 1, 7, 8, 0, 0}; {1, -7, 1, 7, 1, -1, 7, 7, -1, -1, 0, 0}; {5, -3, 5, -5, 5, 7, 7, 4, 8, -7, 0, 0}; f-6, 3, -4, 3, -2, 1, 2, 0, 6, 7, 0, 0}; {4, -3, 6, -3, -7, 5, 4, -5, -2, 2, 0, 0}; {-3, 5, -3, 3, -2, -7, 7, -1, 1, 3, 0, 0}; {-5, 3, -5, 1, -4, -4, 6, 5, -3, -3, 0, 0}; f 7, -1, 7, -3, 8, 8, 6, 4, -5, -5, 0, 0}; {4, -4, 4, -6, 5, 6, 5, 3, -7, -7, 0, 0}; {4, -4, 4, -6, 5, 6, 5, 3, -6, -6, 0, 0}; {1, 7, -3, 1, -5,

5, -2, -5, -4, -5, 0, 0}; {-5, 2, -7, -2, -7, -7, 8, 5, -5, -6, 0, 0}; {6, -3, 4, -7, 5, -1, 7, 7, -7, 8, 0, 0}; {-6, 3, -4, 3, 1, 2, 0, 1, 7, 8, 0, 0}; {-5, 2, -7, -2, -6, -6, 8, 5, -5, -6, 0, 0}; {1, -6, 3, -6, -6, 2, -2, 0, 4, 3, 0, 0}; {-3, 4, -5, 0, -1, 5, 2, 7, 6, 3, 0, 0}; {8, 3, -2, 7, -6, 5, 8, 6, 7, -5, 0, 0}; {-3, 6, -1, 6, -6, 2, 1, -5, -3, -1, 0, 0}; {-5, 3, -5, 1, 4, 1, 1, 2, 8, 7, 0, 0}; {6, -1, 8, -1, 4, 8, -6, 2, 0, -1, 0, 0}; {3, -3, 7, -1, 6, 5, 5, -5, -1, 3, 0, 0}; {-6, 3, -4, 3, -6, -6, 4, 3, -2, -2, 0, 0}; {-7, 2, -5, 2, -7, -6, 3, 2, -2, -2, 0, 0}; {-2, 8, 2, -6, 2, 4, 0, 1, -6, -4, 0, 0}; {-3, 5, -3, 3, -7, -4, -3, 5, 2, -1, 0, 0}; {-1, -7, 3, -5, 4, 3, 2, -6, -3, 1, 0, 0}; {-2, 8, 2, -6, 3, 2, 2, -6, -3, 2, 0, 0}; {-2, 8, 2, -6, 3, 5, -1, 0, -5, -3, 0, 0}; {7, 0, -7, 0, 8, -7, 4, 4, -4, -3, 0, 0}; {-1, 8, 1, 8, 0, 2, 8, -7, 0, 0, 0, 0}; {-4, 4, -4, 2, -6, -7, -3, -3, 4, 3, 0, 0}; {6, -1, 8, -1, 8, 8, 2, 2, -3, -2, 0, 0}; {6, -1, 8, -1, 8, 8, 3, 3, -4, -3, 0, 0}; {6, -1, 8, -1, 8, -7, 2, 2, -3, -3, 0, 0}; {2, -6, 2, 8, 1, -3, -4, -1, -5, -6, 0, 0}; {-2, 6, -2, 5, -2, -3, 6, 5, -1, -1, 0, 0}; {5, -3, 5, -4, 5, 7, 8, 5, 7, -7, 0, 0}; {-2, 6, -2, 5, -1, -3, 6, 6, -2, -1, 0, 0}; {-4, 4, -4, 3, -3, -5, 5, 5, -3, -2, 0, 0}; {1, -6, 3, -5, 7, 3, 3, -6, -3, 1, 0, 0}; {-7, 1, -7, 0, -5, 7, 6, -3, 0, 2, 0, 0}; {-5, 3, -5, 2, -3, -5, 5, 5, -3, -2, 0, 0}; {-1, 8, 1, -7, 5, 5, 0, 1, -6, -4, 0, 0}; {2, -6, 2, -7, 4, 5, 4, 2, -5, -5, 0, 0}; {1, -7, 1, 8, 3, 4, 4, 2, 8, 8, 0, 0}; {-1, 7, -1, 6, 1, 3, 3, 0, -5, -6, 0, 0}; {1, -7, 1, 8, 3, 6, 6, 3, 7, 8, 0, 0}; {0, 8, 0, 7, 3, 4, 3, 2, 8, -7, 0, 0}; {2, -7, 0, 6, 2, -3, 5, 5, 7, 6, 0, 0}; {3, -4, 5, -3, -5, -2, -1, -3, 5, 6, 0, 0}; {7, -2, 5, -5, 7, 8, 7, 3, -6, -7, 0, 0}; {-7, 1, -7, 0, -1, 6, 2, 3, 6, 5, 0, 0}; {-6, 1, 8, -2, -3, 3, 2, 7, 5, 3, 0, 0}; {4, -4, 4, -5, -5, 4, 4, 0, -3, -1, 0, 0}; {4, -4, 4, -5, -4, 4, 4, -1, -3, 0, 0, 0}; {-3, 6, -1, 7, -7, 2, 1, -5, -2, -1, 0, 0}; {1, -6, 3, -5, -2, 5, 7, -2, -1, 0, 0, 0}; {-7, 1, -7, 0, 3, 0, 0, 2, 7, 7, 0, 0}; {-4, 4, -4, 3, 7, -5, -4, 4, 1, -1, 0, 0}; {-4, 4, -4, 3, 7, -5, -4, 5, 2, -1, 0, 0}; {5, -3, 5, -4, 1, -1, -2, 0, -6, -7, 0, 0}; {-7, 2, -5, 3, -7, 8, -7, -3, 2, 4, 0, 0}; {4, -4, 4, -5, 1, -2, -4, -2, -5, -7, 0, 0}; {-4, 4, -4, 3, -7, -7, -3, -3, 4, 3, 0, 0}; {5, -4, 3, -7, -2, -1, -1, 8, 4, -1, 0, 0}; {7, 0, -7, 1, -7, 7, 6, -3, 0, 3, 0, 0}; {0, 8, 0, 7, -2, -2, 7, 5, 0, -1, 0, 0}; {-1, 7, -1, 6, -3, -3, 7, 5, -1, -2, 0, 0}; {4, -3, 6, -2, 6, 7, 2, 2, -4, -3, 0, 0}; {5, -2, 7, -1, 7, 8, 3, 3, -4, -3, 0, 0}; {4, -3, 6, -2, 6, 7, 3, 3, -4, -3, 0, 0}; {0, 8, 0, 7, -1, -2, 7, 5, 0, -1, 0, 0}; {6, -2, 7, -2, 6, 6, -6, -5, 3, 3, 0, 0}; {-4, 4, -3, 4, -4, -4, 5, 4, -1, -1, 0, 0}; {-5, 3, -4, 3, -5, -5, 5, 3, -1, -2, 0, 0}; {2, -6, 3, -6, 2, 3, -7, -6, 1, 1, 0, 0}; {8, 0, -7, 0, -6, -7, 4, 4, -4, -3, 0, 0}; {-6, 1, -7, -1, 8, -7, -7, 3, -1, -4, 0, 0}; {2, -7, 1, 7, 1, -3, -4, -1, -5, -6, 0, 0}; {8, 0, -7, 0, -5, -7, 4, 4, -4, -2, 0, 0}; {4, -4, 5, -4, 7, 7, 3, 3, -5, -4, 0, 0}; {1, -7, 2, -7, 4, 5, 3, 2, -5, -5, 0, 0}; {-3, 5, -2, 5, 0, 2, 2, 0, 8, 8, 0, 0}; {-4, 2, -7, -2, 8, 2, -4, -7, -6, -6, 0, 0}; {3, -6, 2, 8, 3, -1, 8, 7, -1, 0, 0, 0}; {-2, 6, -1, 6, 2, 4, 2, 1, 8, 8, 0, 0}; {7, -2, 6, -4, 7, 8, 6, 4, -6, -6, 0, 0}; {-4, 4, -3, 4, 0, 2, 2, 0, 8, 8, 0, 0}; {-5, 3, -4, 3, -1, 1, 1, -1, -7, -7, 0, 0}; {5, -4, 4, -6, 5, 6, 6, 2, -5, -6, 0, 0}; {5, -4, 4, -6, 5, 6, 6, 2, -4, -6, 0, 0}; {-1, 5, -4, 1, -5, -5, -6, 5, -2, -4, 0, 0}; {4, -5, 3, -7, 4, 6, 5, 2, -7, -7, 0, 0}; {3, -6, 2, 8, 4, 6, 5, 2, -7, -7, 0, 0}; {-6, 0, 7, -4, 7, 1, -5, -7, -6, -6, 0, 0}; {6, -3, 5, -5, 7, 6, 6, 3, -5, -5, 0, 0}; {-2, 6, -1, 6, 3, 4, 2, 2, 8, 8, 0, 0}; {-5, 3, -4, 3, 0, 2, 1, 0, 8, 8, 0, 0}; {-3, 4, -4, 2, 0, -7, 3, 4, 6, 5, 0, 0}; {-3, 4, -4, 2, 0, -7, 3, 4, 7, 5, 0, 0}; {6, -2, 7, -2, -2, 4, 0, 2, 6, 4, 0, 0}; {3, -3, 8, 1, 3, -4, 0, -7, -4, -3, 0, 0};

{-4, 3, -5, 1, 0, 7, 3, 4, 7, 4, 0, 0}; {-6, 2, -5, 2, 4, -6, -5, 2, 1, 1, 0, 0}; {8, 0, -7, 0, 2, -7, -7, 0, 1, 1, 0, 0}; {2, -7, 1, 7, -7, 4, 3, -7, 7, -1, 0, 0}; {2, -7, 1, 7, -7, 4, 3, -7, 7, 0, 0, 0}; {-1, 8, 2, -6, -1, 5, 7, 0, -1, -2, 0, 0}; {2, -6, 3, -6, -1, -4, -4, 0, 7, 7, 0, 0}; {8, 1, -5, 3, -7, 8, 8, -3, 1, 4, 0, 0}; {0, 8, 1, 8, -3, -3, -4, -2, -6, 8, 0, 0}; {-7, 0, 8, -2, 3, 2, -5, 6, 2, 0, 0, 0}; {1, 8, 0, 6, -5, -2, -2, 6, 2, -1, 0, 0}; {-5, 3, -4, 3, -6, -6, 3, 2, -2, -2, 0, 0}; {7, -1, 8, 0, 7, 8, -6, -5, 8, 7, 0, 0}; {-4, 3, -5, 2, 8, -5, -4, 5, 2, -2, 0, 0}; {-1, 7, 0, 8, 0, 1, 8, -7, 0, 1, 0, 0}; {5, -3, 6, -2, 7, 7, 2, 2, -4, -3, 0, 0}; {-2, 6, -1, 7, 0, 1, 8, -6, 0, 1, 0, 0}; {-5, 4, -2, 7, 2, 1, 1, 8, -4, 1, 0, 0}; {4, -4, 5, -3, 7, 7, 2, 2, -4, -3, 0, 0}; {5, -3, 6, -2, 8, -7, 3, 3, -3, -3, 0, 0}; {3, -5, 4, -4, 7, 4, 3, -5, -2, 1, 0, 0}; {0, 6, -3, 3, -4, -5, -1, -3, 6, 2, 0, 0}; {0, 6, -3, 3, -4, -4, -5, 5, 0, -3, 0, 0}; {-6, 2, -5, 3, -2, 1, 2, 0, 6, 7, 0, 0}; {3, -6, 2, -7, 4, 6, 6, 3, 8, -7, 0, 0}; {-3, 4, -4, 3, -2, -3, 7, 6, -2, -2, 0, 0}; {-6, 2, -5, 3, -1, 1, 1, 0, 7, 8, 0, 0}; {3, -6, 2, -7, 5, 6, 5, 3, -7, -7, 0, 0}; {1, 8, 0, 7, 3, 4, 4, 2, -7, -7, 0, 0}; {0, 7, -1, 6, 2, 4, 4, 1, 8, 8, 0, 0}; {-5, 3, -4, 4, 1, 2, 1, 1, 7, 8, 0, 0}; {3, -6, 2, -7, 6, 6, 5, 3, -7, -7, 0, 0}; {5, -4, 4, -5, 8, -1, -1, 5, 4, 2, 0, 0}; {-6, 1, -7, 0, -3, -7, 0, 2, 5, 5, 0, 0}; {2, -6, 3, -5, -5, 1, -2, 0, 5, 4, 0, 0}; {0, -7, 3, -4, -3, 5, 7, -3, 0, -2, 0, 0}; {0, -7, 3, -4, -3, 5, 7, -3, 0, -1, 0, 0}; {2, -4, 7, 1, 3, -4, 1, -7, -4, -2, 0, 0}; {-4, 3, -5, 2, 1, 7, 3, 4, 7, 5, 0, 0}; {3, -6, 2, -7, -7, -1, -2, 4, 4, 2, 0, 0}; {2, -4, 7, 1, 4, -3, 1, -7, -4, -3, 0, 0}; {2, -7, 1, 8, 8, -2, -1, 6, 3, 1, 0, 0}; {6, -5, 1, 6, 4, -7, 4, -5, 8, 4, 0, 0}; {-7, -1, 6, -4, -5, 2, -2, 6, 5, 2, 0, 0}; {6, -2, 7, -1, 1, 8, -7, 0, 1, 0, 0, 0}; {6, -2, 7, -1, 1, 8, -7, 0, 1, 1, 0, 0}; {0, 7, -1, 6, 7, -2, -3, 3, 3, 3, 0, 0}; {4, -4, 5, -3, 0, 7, 8, 0, 0, -1, 0, 0}; {-2, 6, -1, 7, -5, -5, -5, -3, 8, 7, 0, 0}; {0, 8, 1, -7, -2, -4, -4, -2, -7, 8, 0, 0}; {-6, 1, -7, 0, 4, 1, 0, 1, -5, -6, 0, 0}; {-2, 6, -1, 7, -3, -6, -6, -3, -7, 8, 0, 0}; {-3, 5, -2, 6, -4, -5, -5, -3, 8, 8, 0, 0}; {-1, 6, -2, 5, -6, -3, -3, 6, 2, -1, 0, 0}; {-3, 4, -4, 3, 8, -4, -4, 5, 2, -2, 0, 0}; {-4, 3, -5, 2, 7, -5, -5, 4, 1, -2, 0, 0}; {5, -4, 4, -4, 1, -2, -3, -1, -6, -7, 0, 0}; {-3, 4, -4, 4, -7, -7, -3, -3, 5, 4, 0, 0}; {-5, 2, -6, 2, 7, 8, -2, -2, 4, 2, 0, 0}; {0, 8, 1, -6, 0, 3, -7, -7, 2, 1, 0, 0}; {4, -5, 3, -5, 1, -2, -3, -1, -6, -7, 0, 0}; {3, -6, 2, -6, 0, -2, -3, -1, -6, -7, 0, 0}; {4, -4, 5, -2, 5, 6, -7, -6, 7, 6, 0, 0}; {-3, 4, -4, 4, -6, -6, -2, -3, 6, 4, 0, 0}; {-5, 2, -6, 2, 8, 8, -3, -3, 4, 3, 0, 0}; {-7, 0, 8, 0, 6, 6, -3, -3, 3, 2, 0, 0}; {-7, 0, 8, 0, 6, -6, -5, 3, 0, -3, 0, 0}; {8, -1, 7, -1, 6, 6, -5, -6, 4, 2, 0, 0}; {-6, 1, -7, 1, 8, 8, -3, -3, 4, 3, 0, 0}; {8, -1, 7, -1, 6, 6, -5, -5, 4, 3, 0, 0}; {8, -1, 7, -1, 6, 6, -4, -4, 3, 2, 0, 0}; {7, -2, 6, -2, 5, 5, -5, -5, 3, 2, 0, 0}; {8, -1, 7, -1, 6, 6, -3, -3, 3, 2, 0, 0}; {6, -2, 7, 0, -7, 7, 6, -4, 0, 3, 0, 0}; {-7, 0, 8, 0, 8, 8, -4, -4, 4, 3, 0, 0}; {6, -3, 5, -3, 5, 5, -6, -6, 3, 2, 0, 0}; {8, -1, 7, -1, 7, 7, -2, -2, 3, 2, 0, 0}; {6, -3, 5, -3, 5, 5, -4, -3, 2, 2, 0, 0}; {-3, 4, -4, 4, -3, -4, 7, 6, -2, -2, 0, 0}; {-4, 3, -5, 3, -4, -5, 6, 5, -2, -2, 0, 0}; {-2, 5, -3, 5, -2, -3, 7, 6, -1, -1, 0, 0}; {4, -5, 3, -5, 4, 4, -6, -6, 2, 1, 0, 0}; {5, -4, 4, -4, 5, 5, -5, -4, 2, 2, 0, 0}; {7, -3, 4, -5, 4, 0, -2, 0, -4, -6, 0, 0}; {-6, 2, -5, 4, -1, 0, 5, 7, -1, 1, 0, 0}; {0, 7, -1, 7, 1, 2, 8, 8, 1, 0, 0, 0}; {1, 8, 0, 8, 3, 5, 4, 2, 8, 8, 0, 0}; {0, 7, -1, 7, 2, 4, 4, 1, 8, 8, 0, 0}; {0, 7, -1, 7, 2, 4, 4, 0, -4, -6, 0, 0}; {-1, 6, -2, 6, 1, 3, 4, -1, -4, -6, 0, 0}; {8, -2, 5, -4, 7, 8, 8, 3, -2, -5, 0, 0}; {-2, 4, -5, 2, -1, 5, 4, 8, 6, 4, 0, 0}; {8, 0, -7, 2, 1, -7, -6, 0, 2, 0, 0, 0}; {8, 1,

-5, 5, 5, -2, 2, -5, -4, -2, 0, 0}; {-7, 0, 8, 0, -2, 6, 1, 3, 6, 4, 0, 0}; {-4, 2, -7, 0, -2, 3, 4, -6, 6, 2, 0, 0}; {1, 8, 0, 8, 7, -2, -3, 2, 4, 2, 0, 0}; {-3, 3, -6, 1, -1, 5, 3, 8, 7, 3, 0, 0}; {6, -2, 7, 0, 0, 8, -7, -1, 1, 0, 0, 0}; {-4, 2, -7, 0, -2, 4, 3, 8, 6, 3, 0, 0}; {-5, 1, 8, -1, -3, 3, 3, 8, 5, 3, 0, 0}; {7, 0, -6, 4, 5, -2, 2, -5, -4, -2, 0, 0}; {8, -1, 7, -1, -2, 5, 1, 3, 6, 5, 0, 0}; {-7, -1, 6, -3, -4, 2, 0, 6, 5, 3, 0, 0}; {-1, 6, -2, 6, 6, -3, -3, 2, 3, 2, 0, 0}; {-6, 0, 7, -2, -3, 3, 2, 7, 5, 2, 0, 0}; {-6, 0, 7, -2, -3, 3, 2, 7, 5, 3, 0, 0}; {-1, 6, -2, 6, 6, -3, -3, 3, 3, 1, 0, 0}; {-6, 0, 7, -2, -3, 3, 3, 8, 5, 2, 0, 0}; {8, 1, -5, 5, 7, 0, 3, -5, -3, -2, 0, 0}; {-2, 5, -3, 5, 6, -3, -3, 3, 3, 1, 0, 0}; {1, -7, 2, -5, -3, 5, 6, -2, -1, -1, 0, 0}; {-4, 4, -3, 6, -7, -7, -6, -3, 7, 7, 0, 0}; {-5, 3, -4, 5, -7, -6, -6, -4, 8, 6, 0, 0}; {8, 1, -5, 5, -6, 0, 7, 8, 7, 8, 0, 0}; {7, -2, 6, -2, 2, -1, -1, 0, -6, -7, 0, 0}; {7, -2, 6, -2, 2, 0, -1, 0, -6, -7, 0, 0}; {-5, 3, -4, 5, -6, -7, -7, -4, 8, 7, 0, 0}; {6, -3, 5, -3, 1, -1, -1, -1, -6, -7, 0, 0}; {-3, 4, -4, 4, 8, -4, -3, 4, 1, -1, 0, 0}; {-5, 2, -6, 2, 6, -5, -5, 5, 2, -2, 0, 0}; {-5, 3, -4, 6, -5, 8, -7, -3, 8, 8, 0, 0}; {-4, 4, -3, 7, -4, -5, -5, -3, 7, 7, 0, 0}; {-7, 1, -6, 4, -7, -7, -7, -4, 7, 7, 0, 0}; {-2, 5, -3, 6, -6, -6, -4, -3, 7, 6, 0, 0}; {-7, 0, 8, 1, 5, -6, -5, 3, 1, -2, 0, 0}; {1, 8, 0, -7, -2, -4, -4, -2, -7, 8, 0, 0}; {2, -7, 1, -6, -1, -3, -3, -1, 8, 8, 0, 0}; {2, -7, 1, -6, -1, -2, -3, -1, -7, 8, 0, 0}; {1, 8, 0, -7, -2, -3, -3, -2, -7, 8, 0, 0}; {7, -2, 6, -1, 4, 6, -4, -4, 4, 2, 0, 0}; {2, -7, 1, -6, 0, -2, -3, -1, -7, -7, 0, 0}; {-5, 1, 8, 0, 5, 2, 1, 1, -5, -6, 0, 0}; {0, 7, -1, 8, -2, -4, -4, -2, 8, 8, 0, 0}; {4, -4, 5, -1, 6, 6, 6, -7, 7, 6, 0, 0}; {-2, 5, -3, 6, -4, -5, -4, -3, 8, 8, 0, 0}; {4, -4, 5, -1, 7, 6, 6, -4, 0, 3, 0, 0}; {-2, 5, -3, 6, -3, -5, -6, -4, -7, 8, 0, 0}; {7, -2, 6, -1, 6, 6, -5, -5, 4, 3, 0, 0}; {5, -4, 4, -3, 4, 4, -6, -6, 3, 3, 0, 0}; {-1, 6, -2, 7, -2, -1, -7, 8, 0, -1, 0, 0}; {6, -3, 5, -2, 5, 6, -5, -5, 4, 3, 0, 0}; {5, -4, 4, -3, 4, 5, -4, -4, 2, 1, 0, 0}; {-3, 3, -6, 2, -7, -5, -4, 5, 2, -2, 0, 0}; {-7, -1, 6, -2, 5, 1, -2, -1, -4, -6, 0, 0}; {0, 6, -3, 5, -4, -5, 0, -1, 6, 4, 0, 0}; {4, -5, 3, -4, 4, 4, -6, -5, 2, 2, 0, 0}; {-3, 3, -6, 2, -7, 8, -1, -2, 4, 2, 0, 0}; {-1, 7, 0, -6, 4, 3, 3, -6, -2, 2, 0, 0}; {-1, 5, -4, 4, -4, -5, -1, -2, 6, 4, 0, 0}; {-7, -1, 6, -2, 7, -7, -7, 3, -1, -4, 0, 0}; {-5, 1, 8, 0, -7, 8, -3, -4, 4, 2, 0, 0}; {-6, 1, -7, 2, -2, 1, 1, -1, -6, -7, 0, 0}; {-2, 6, -1, -7, 7, -4, -3, 7, -7, 1, 0, 0}; {-7, -1, 6, -2, -5, 2, 1, 6, 5, 3, 0, 0}; {-4, 2, -7, 1, -1, 5, 3, 6, 7, 3, 0, 0}; {1, 8, 0, -7, 8, -1, -2, 2, 4, 2, 0, 0}; {0, 7, -1, 8, 7, -2, -3, 2, 4, 1, 0, 0}; {0, 7, -1, 8, 7, -2, -3, 2, 4, 2, 0, 0}; {5, -6, 0, 7, 4, -7, 7, -6, 8, 4, 0, 0}; {-6, 0, 7, -1, -3, 3, 2, 6, 6, 4, 0, 0}; {5, -2, 8, 3, 4, -3, 2, -6, -4, -1, 0, 0}; {3, 8, -2, 5, 2, 8, 5, -7, 7, 4, 0, 0}; {-5, 3, -4, 6, 6, -1, 2, -3, -4, -2, 0, 0}; {8, -2, 5, -3, -4, 2, 1, 5, 5, 4, 0, 0}; {2, 7, -3, 4, 2, 7, 6, -6, 6, 3, 0, 0}; {-6, 2, -5, 5, -7, -6, -6, -4, 7, 6, 0, 0}; {7, -1, 8, 2, 6, 7, -7, -5, 6, 5, 0, 0}; {0, 6, -3, 6, 8, -1, -2, 5, 3, -1, 0, 0}; {-1, 5, -4, 5, 7, -2, -3, 4, 2, -1, 0, 0}; {5, -4, 4, -2, 2, 8, -7, 2, 0, -3, 0, 0}; {5, -4, 4, -2, 2, 5, -4, -4, 4, 1, 0, 0}; {6, -3, 5, -1, 3, 8, -7, 3, 1, -3, 0, 0}; {-1, 5, -4, 5, -7, -3, -3, 6, 3, -1, 0, 0}; {4, -4, 5, 0, 6, 5, 7, -6, 6, 6, 0, 0}; {0, 7, -1, -7, -2, -3, -4, -2, 8, 8, 0, 0}; {5, -3, 6, 1, 7, 7, 8, -5, 6, 6, 0, 0}; {-1, 6, -2, 8, -3, -4, -4, -2, 8, 7, 0, 0}; {-2, 5, -3, 7, -4, -5, -4, -3, 7, 7, 0, 0}; {-2, 5, -3, 7, -4, -5, -4, -3, 8, 7, 0, 0}; {3, -6, 2, -4, 1, 3, -5, -5, 3, 1, 0, 0}; {3, -6, 2, -4, 1, 4, -5, -5, 3, 1, 0, 0}; {-7, -1, 6, -1, 4, 1, -1, 1, -5, -6, 0, 0}; {8, -2, 5, -2, 3, 1, -1, 0, -5, -7, 0, 0}; {-1, 5, -4, 5, -6, -6, -1, -2, 6, 4, 0, 0}; {-3, 3, -6, 3, 8, 8, -1, -2, 5, 3, 0, 0}; {4, -4, 5, 0, 7, -6, 4, 5, -2, -1, 0, 0}; {1, 8, 0, -6, 0, 2, -6, -6, 2, 1, 0, 0}; {-5, 2, -6, 4, -5, -7, -7, -4, 8, 7, 0, 0}; {2, -6, 3, -2, 6, 7, 3, 4, -4, -1, 0, 0}; {-3, 3, -6, 3, -7, -7, -1, -2, 5, 3, 0, 0}; {-7, -1, 6, -1, 7, -7, -5, 3, 1, -2, 0, 0}; {2, 7, -3, 5, -4, -2, -2, 6, 3, -1, 0, 0}; {2, 7, -3, 5, -4, 8, 1, -1, 4, 2, 0, 0}; {-2, 6, -1, -6, 4, 3, 2, -7, -2, 1, 0, 0}; {-4, 2, -7, 2, -6, 8, -1, -1, 3, 3, 0, 0}; {0, 7, -1, -7, 2, 2, 8, -7, 1, 2, 0, 0}; {-6, 0, 7, 0, -7, 8, -3, -3, 3, 3, 0, 0}; {3, 8, -2, 6, -2, -3, 1, 0, 6, 3, 0, 0}; {8, -2, 5, -2, 7, 7, -4, -3, 3, 2, 0, 0}; {6, -3, 5, -1, -3, 0, -1, -1, -7, -7, 0, 0}; {3, 8, -2, 6, 2, 8, 7, -6, 8, 6, 0, 0}; {-2, 5, -3, 7, 6, -3, -3, 1, 4, 1, 0, 0}; {2, 7, -3, 5, 2, 8, 5, 8, 8, 4, 0, 0}; {-2, 3, -7, 1, -2, 5, 1, 7, 6, 3, 0, 0}; {1, 8, 0, -5, -1, 6, 7, 1, -1, -4, 0, 0}; {3, -5, 4, 0, 6, 4, 6, -6, 6, 6, 0, 0}; {-6, 1, -7, 4, -6, -7, -7, -4, 7, 7, 0, 0}; {8, -1, 7, 2, -7, 7, 8, -5, 7, 7, 0, 0}; {4, -6, 1, -5, 1, -1, -3, -1, -6, -7, 0, 0}; {-2, 3, -7, 2, 8, 4, 0, 0, -3, -5, 0, 0}; {3, 8, -2, 7, -2, -4, 1, 0, 6, 4, 0, 0}; {-7, -1, 6, 0, 8, 7, -4, -4, 4, 3, 0, 0}; {0, 5, -5, 4, -5, -5, 1, 0, 5, 2, 0, 0}; {8, -4, 1, -7, -1, -6, 5, 4, 0, -3, 0, 0}; {8, -2, 5, -1, 8, 6, -3, -2, 2, 2, 0, 0}; {1, 6, -4, 5, -3, -5, 1, 1, 5, 2, 0, 0}; {-5, -1, 4, -4, 7, -4, -6, -4, -7, 6, 0, 0}; {5, -4, 4, -1, -1, 8, -3, -4, -6, -5, 0, 0}; {-6, -2, 3, -4, 5, 1, -4, 4, 5, 2, 0, 0}; {2, -4, 7, 7, 0, -7, -1, 1, 4, -1, 0, 0}; {-4, 5, -1, -2, 6, -2, 3, 5, 6, 0, 0, 0}; {2, 5, -7, 2, -6, 5, -1, 7, 7, 4, 0, 0}; {0, 3, 7, 0, 8, 4, -2, 6, 7, 3, 0, 0}; {-2, 7, 1, 1, 7, 0, 4, 6, 7, 0, 0, 0}; {3, -3, 8, -7, 0, -6, -1, 3, 4, -2, 0, 0}; {-4, 5, -1, -1, 5, -2, 3, 5, 6, -1, 0, 0}; {1, -5, 6, 7, -1, -7, -1, 1, 4, -2, 0, 0}; {-1, -7, 4, 5, -2, 8, -2, 1, 3, -2, 0, 0}; {7, 0, -6, -6, 2, -4, 1, 3, 5, -1, 0, 0}; {8, -4, 1, -4, 1, -7, 4, 0, 5, 4, 0, 0}; {5, 8, -4, 6, -4, -7, 1, 8, 7, 5, 0, 0}; {4, 7, -5, 5, -5, 8, 0, 8, 7, 4, 0, 0}; {8, -4, 1, -4, 4, 2, -5, 3, 5, 3, 0, 0}; {1, 4, 8, 2, -7, 6, -1, 7, 7, 4, 0, 0}; {1, 4, 8, 2, -7, 6, -1, 7, 7, 5, 0, 0}; {0, 3, 7, 1, 8, 5, -2, 6, 7, 3, 0, 0}; {-6, -4, -1, 8, -1, -6, 2, -5, -6, 7, 0, 0}; {-2, 1, 5, -1, 7, 4, -3, 5, 7, 3, 0, 0}; {-3, 0, 4, -2, 6, 3, -4, 5, 7, 3, 0, 0}; {5, 7, -6, 3, -5, 7, 0, 7, -7, 4, 0, 0}; {4, 6, -7, 2, -6, 6, -1, 7, -7, 3, 0, 0}; {-5, -6, -6, 1, -4, 2, -6, 2, 4, 8, 0, 0}; {-4, -7, 7, -4, 5, -7, 1, -7, 8, -5, 0, 0}; {4, 0, -3, 1, -6, -4, 4, -5, -6, -4, 0, 0}; {-5, 8, 6, -5, 5, -7, 0, 8, 7, -5, 0, 0}; {3, -1, -4, 0, -7, -4, 4, -5, -6, -4, 0, 0}; {2, -2, -5, -1, 8, -5, 3, -6, -6, -4, 0, 0}; {7, 1, -4, -2, 5, 6, -3, 3, -1, -1, 0, 0}; {7, 1, -4, -2, 6, 6, -3, 3, -2, -1, 0, 0}; {-2, -6, 7, -5, 5, 8, 1, 8, -5, -5, 0, 0}; {1, 4, 8, 3, 6, -3, 8, 3, 8, 4, 0, 0}; {7, -5, 0, -4, 3, 2, -6, 3, 5, 3, 0, 0}; {-5, -3, 0, -6, -1, -4, 3, -6, -7, 5, 0, 0}; {4, 8, -3, -7, 1, -1, -7, 2, 4, 2, 0, 0}; {8, -6, -3, 7, -3, -6, 2, -7, -7, 5, 0, 0}; {3, 1, 0, 7, 1, 6, -3, 5, 5, -6, 0, 0}; {5, 1, -2, 3, -5, -2, 5, -4, -6, -3, 0, 0}; {-4, -7, 7, -3, 6, -5, 1, 8, 7, -3, 0, 0}; {2, -2, -5, 0, -7, -4, 3, -6, -6, -4, 0, 0}; {-4, 7, 3, 7, -1, 1, 8, -2, -4, -1, 0, 0}; {-4, 7, 3, 7, -1, 1, 8, -2, -4, -2, 0, 0}; {0, -4, -7, -2, 7, -6, 2, -7, -6, -5, 0, 0}; {-7, 4, 0, 4, -3, -2, 6, -3, -5, -3, 0, 0}; {-2, -6, 7, -4, 6, 8, 1, -7, -7, -4, 0, 0}; {-3, -7, 6, -5, 5, 8, 0, 8, -7, -5, 0, 0}; {7, -2, 6, 6, -1, 1, -6, 7, -3, -1, 0, 0}; {4, 8, -3, -6, 1, 0, 8, 1, 4, 2, 0, 0}; {5, -7, -2, -5, 2, 1, -6, 3, 4, 2, 0, 0}; {3, 7, -4, -7, 1, -1, 8, 1, 4, 2, 0, 0}; {7, -7, -4, 7, -3, -7, 1, -7, 8, 5, 0, 0}; {0, -2, -3, 5, -1, 4, -4, 4, 4, -6, 0, 0}; {-5, 8, 6, -3, 6, -6, 2, 8, 7, -4, 0, 0}; {5, 0, -4, 1, -7, -4, 3, -5, -4, -4, 0, 0}; {6, 1, -3, 2, -5, -3, 4, -5, -4, -4, 0, 0}; {2, -5, 5, -7, -2, 0, -7, 3, 1, 0, 0, 0}; {-7, 2, -4, 1, -3, 6, 6, -2, 0, 3, 0, 0}; {-2, 6, -1, 3, 2, -6, 3, 5, 8, 6, 0, 0}; {-4, 6, 1, 7, -7, 0, -4, -1, 3, 3, 0, 0}; {5, -2, 8, -3, -2, 5, 0, 2, 5, 4, 0, 0}; {3, -4, 6, -5, -4, 4, -1, 1, 4, 4, 0, 0}; {-3, 5, -2, 2, 5, 6, -2, 7, 4, 2, 0, 0}; {-2, 7, 1, 6, -5, -3, 6, 2, -1, 0, 0, 0}; {-2, 7, 1, 6, -4, -3, 6, 3, -1, 0, 0, 0}; {1, -5, 6, -4, 3, 5, 0, 0, -5, -2, 0, 0}; {7, 2, -2, 5, -3, 1, -5, -5, -6, -4, 0, 0}; {1, -5, 6, -4, 3, 6, 0, -1, -4, -2, 0, 0}; {2, -4, 7, -3, 5, 6, -1, 0, -4, -1, 0, 0}; {7, 2, -2, 5, -2, 1, -5, -4, -7, -3, 0, 0}; {7, 2, -2, 5, -2, 1, -5, -4, -6, -4, 0, 0}; {-5, 4, -2, 4, -7, -5, 4, 0, -1, -2, 0, 0}; {-7, 2, -4, 2, 7, -6, 3, 0, -3, -1, 0, 0}; {6, 1, -3, 5, -3, 0, -6, -5, -7, -3, 0, 0}; {1, -5, 6, -3, 4, 6, 0, -2, -3, -3, 0, 0}; {5, -3, 6, -5, 0, 0, -7, 4, 1, 1, 0, 0}; {5, -3, 6, -5, 0, 0, -7, 4, 2, 0, 0, 0}; {-6, 3, -3, 3, -7, -5, 4, 1, -1, -2, 0, 0}; {3, -5, 4, -7, -2, -1, 8, 4, 0, 0, 0, 0}; {8, 1, -5, 1, 7, -6, 3, 1, -2, -2, 0, 0}; {0, -6, 5, -4, 4, 5, -1, -1, -4, -2, 0, 0}; {5, 0, -4, 4, -3, -1, -6, -5, -7, -3, 0, 0}; {-1, -7, 4, -5, 3, 4, -2, -1, -5, -2, 0, 0}; {-7, 2, -4, 2, -7, -6, 3, 2, -2, -1, 0, 0}; {-2, 8, 3, -6, 2, 4, -2, -2, -5, -3, 0, 0}; {-2, 8, 3, -6, 2, 4, -2, -2, -5, -2, 0, 0}; f 7, 0, -6, 0, 7, -7, 3, 2, -3, -2, 0, 0}; {-3, 5, -2, 3, -7, -5, -3, 5, 1, -1, 0, 0}; {-5, 5, 0, 7, 0, 3, -3, -2, -5, -4, 0, 0}; {2, -7, 1, 5, -3, -3, -4, 5, 1, -3, 0, 0}; {-7, 2, -4, 3, -3, 1, 3, 1, 5, 7, 0, 0}; {-1, 8, 2, -7, 4, 5, -1, 0, -6, -4, 0, 0}; {-1, 8, 2, -7, 4, 5, 0, 1, -6, -4, 0, 0}; {4, -4, 5, -5, 5, 6, 5, 2, -4, -5, 0, 0}; {2, -6, 3, -7, 3, 7, 7, 3, 7, 8, 0, 0}; {-4, 4, -3, 3, -2, -4, 5, 5, -3, -1, 0, 0}; {0, -7, 3, -6, 6, 6, 0, 1, -6, -3, 0, 0}; {6, -2, 7, -3, -7, 8, 3, 3, -5, -3, 0, 0}; {-2, 6, -1, 5, 1, 2, 3, 0, -7, -7, 0, 0}; {2, -7, 1, 6, 3, -3, 5, 6, 8, 7, 0, 0}; {1, 8, 0, 5, 2, -4, 4, 5, 7, 6, 0, 0}; {2, -7, 1, 6, 4, -5, 6, 6, 7, 6, 0, 0}; {-7, 1, -6, 0, 0, 7, 2, 3, 5, 5, 0, 0}; {5, -3, 6, -4, -4, 4, 0, 2, 5, 4, 0, 0}; {5, -2, 8, -1, 1, -1, -7, -4, 0, 4, 0, 0}; {0, 6, -3, 1, 1, 6, 1, -7, 7, 2, 0, 0}; {0, 6, -3, 1, 1, 6, 1, -7, 7, 3, 0, 0}; {4, -5, 3, 8, -7, -1, -4, 4, 4, 2, 0, 0}; {-2, 4, -5, -1, -1, 5, 0, 8, 6, 2, 0, 0}; {7, -1, 8, -2, 1, -2, -1, 0, 7, 7, 0, 0}; {-4, 5, -1, 6, -5, -7, -7, -1, 2, 5, 0, 0}; {8, 2, -3, 5, -5, 1, 4, -3, -3, -2, 0, 0}; {-4, 5, -1, 6, -4, -7, 8, -1, 2, 5, 0, 0}; {-5, 4, -2, 5, -5, -7, -7, -2, 2, 5, 0, 0}; {0, -6, 5, -3, 4, 3, 4, -5, -1, 3, 0, 0}; {3, -5, 4, -6, -1, -1, 8, 4, 0, 0, 0, 0}; {8, 1, -5, 2, -7, -6, 3, 2, -2, -1, 0, 0}; {-5, 5, 0, 8, 0, 2, -4, -3, -6, -3, 0, 0}; {-7, 1, -6, 0, 6, -7, -5, 3, 0, -2, 0, 0}; {3, -5, 4, -6, 1, -2, -3, 0, -6, -6, 0, 0}; {-5, 5, 0, 8, 1, 1, -1, -7, -4, 0, 0, 0}; {-1, 7, 0, 6, -3, -3, 6, 4, 0, -1, 0, 0}; {4, -3, 7, -2, 7, 5, 3, -4, -2, 1, 0, 0}; {1, -6, 4, -5, 4, 5, 1, 1, -5, -4, 0, 0}; {-5, 4, -2, 5, -2, 2, 4, 2, 5, 7, 0, 0}; {-7, 1, -5, 1, -6, -7, 3, 3, -3, -2, 0, 0}; {7, -1, -7, -1, 8, 8, 3, 3, -4, -3, 0, 0}; {-2, 5, -2, 3, 1, -6, 3, 4, 7, 6, 0, 0}; {-3, 4, -3, 2, 0, -6, 2, 4, 7, 6, 0, 0}; {-4, 3, -4, 1, -1, -6, 2, 3, 6, 6, 0, 0}; {-4, 3, -4, 1, -1, -6, 3, 4, 7, 7, 0, 0}; {-4, 3, -4, 1, 0, 8, 2, 4, 7, 5, 0, 0}; {-3, 8, 5, -2, 5, -1, 2, -5, -4, -2, 0, 0}; {6, -1, -6, 1, 7, 8, 2, -1, -3, -2, 0, 0}; {1, -7, 3, -7, -2, -2, 8, 3, 1, -1, 0, 0}; {4, -3, 8, -1, 5, 7, 1, -2, -3, -3, 0, 0}; {-6, 1, -6, -1, 3, 3, -4, 6, 3, 1, 0, 0}; {-2, 6, 0, 6, -5, -3, 6, 2, 0, -1, 0, 0}; {-1, 8, 3, -6, 0, 4, -2, -3, -5, -4, 0, 0}; {6, -1, -6, 1, 8, 6, 6, -3, 0, 4, 0, 0}; {0, 8, 2, 8, -2, -3, 7, 3, 0, 0, 0, 0}; {-2, 6, 0, 6, -4, -4, 6, 2, 0, -1, 0, 0}; {-4, 4, -2, 4, -6, -5, 5, 2, -1, -2, 0, 0}; {6, -3, 6, -5, 0, 0, -7, 5, 1, 0, 0, 0}; {-6, 2, -4, 2, 8, -6, 3, 1, -2, -2, 0, 0}; {-5, 4, -1, 7, -1, 1, -3, -2, -7, -5, 0, 0}; {-2, 5, -2, 4, -6, -3, -3, 6, 2, -1, 0, 0}; {5, -4, 5, -5, 2, -1, -2, 0, -5, -6, 0, 0}; {5, -3, 7, -2, 7, 7, 2, 2, -4, -3, 0, 0}; {-7, 0, -7, -1, 7, 7, -4, -4, 3, 2, 0, 0}; {4, -4, 6, -3, 6, 7, 1, 1, -4, -3, 0, 0}; {4, -4,

6, -3, 8, 5, 4, -5, -2, 2, 0, 0}; {-2, 5, -2, 4, -2, -3, 7, 6, -2, -2, 0, 0}; {4, -5, 4, -6, 5, 7, 6, 3, -7, -7, 0, 0}; {4, -4, 6, -3, -7, 4, 4, -4, -1, 2, 0, 0}; {3, -6, 3, -7, 4, 5, 5, 1, -5, -6, 0, 0}; {5, -5, 3, 8, 4, -2, 6, 6, 8, 7, 0, 0}; {5, -4, 5, -5, -7, -1, 0, 6, 4, 2, 0, 0}; {5, -4, 5, -5, -6, -1, 1, 8, 4, 2, 0, 0}; {4, -5, 4, -6, -7, -2, 0, 7, 4, 2, 0, 0}; {3, -6, 3, -7, 8, -2, -1, 6, 4, 1, 0, 0}; {-6, 1, -6, 0, -1, 7, 2, 3, 6, 5, 0, 0}; {-7, 1, -5, 2, 3, 1, -6, -3, 1, 4, 0, 0}; {7, -1, -7, 0, 2, 8, -6, 2, 1, 0, 0, 0}; {5, -3, 7, -2, 1, 7, -7, 1, 0, 0, 0, 0}; {3, -5, 5, -4, -1, 6, 7, -1, 0, 0, 0, 0}; {7, 0, -5, 3, 7, -1, 2, -5, -3, -1, 0, 0}; {1, -6, 5, -3, 3, 5, -1, -3, -5, -3, 0, 0}; {1, -6, 5, -3, 3, 5, -1, -3, -5, -2, 0, 0}; {-4, 5, 0, 8, -2, 2, -4, -4, -6, -5, 0, 0}; {-3, 4, -3, 3, 8, -4, -4, 5, 2, -1, 0, 0}; {8, 0, -6, 2, 8, -7, -7, -5, 8, 7, 0, 0}; {-4, 5, 0, -7, 0, 3, 5, 7, 6, 5, 0, 0}; {4, -5, 4, -5, 1, -2, -3, -1, -6, -7, 0, 0}; {7, -1, -7, 1, 8, 8, -7, -5, 8, 7, 0, 0}; {5, -5, 3, -7, -2, -3, 5, 4, 0, -2, 0, 0}; {8, -1, 8, -1, 5, 7, -4, -4, 4, 2, 0, 0}; {7, -2, 7, -2, 4, 6, -4, -4, 3, 1, 0, 0}; {-4, 4, -2, 6, -3, 0, 8, -7, 0, 0, 0, 0}; {1, 8, 1, 8, -1, -3, -4, -2, -6, -7, 0, 0}; {-6, 1, -6, 1, 8, 8, -4, -4, 4, 3, 0, 0}; {2, 8, 0, 6, -4, -2, -2, 6, 2, -2, 0, 0}; {6, -3, 6, -3, 5, 5, -5, -4, 2, 2, 0, 0}; {-4, 3, -4, 3, -4, -5, 5, 4, -2, -2, 0, 0}; {5, -4, 5, -4, 5, 5, -6, -5, 2, 2, 0, 0}; {8, -2, 6, -4, 5, 1, -1, 1, -4, -5, 0, 0}; {-7, 0, -7, 0, -6, -6, 5, 4, -3, -3, 0, 0}; {0, 7, 0, 7, 2, 4, 3, 1, -7, -7, 0, 0}; {1, 8, 1, 8, 3, 5, 4, 1, -5, -6, 0, 0}; {-6, 0, 8, -2, 8, -7, 8, 3, -3, -5, 0, 0}; {6, -4, 4, -6, 4, 0, -7, 8, 0, 0, 0, 0}; {-2, 5, -2, 5, 1, 3, 3, 0, 8, 8, 0, 0}; {0, 5, -4, 1, -5, 4, -2, -5, -5, -5, 0, 0}; {6, -2, 8, 0, -2, 0, -1, -1, 6, 7, 0, 0}; {2, -6, 4, -4, -6, -3, -3, -3, 6, 7, 0, 0}; {3, -6, 3, -6, 7, -2, -1, 5, 4, 2, 0, 0}; {-2, 4, -4, 2, -1, 4, 3, -7, 7, 4, 0, 0}; {2, -7, 2, -7, 7, -3, -2, 4, 4, 2, 0, 0}; {1, 8, 1, 8, 6, -4, -2, 5, 3, 1, 0, 0}; {2, -7, 2, -7, 7, -2, -1, 5, 4, 1, 0, 0}; {-4, 2, -6, 0, -2, 3, 4, -6, 6, 3, 0, 0}; {7, -2, 7, -2, -3, 4, 1, 2, 6, 4, 0, 0}; {-5, 1, -7, -1, -3, 3, 2, 8, 6, 3, 0, 0}; f-1, 6, -1, 6, 5, -4, -4, 3, 3, 1, 0, 0}; {8, -1, 8, -1, -2, 5, 1, 3, 6, 4, 0, 0}; {-6, 3, -2, 7, -7, 1, 4, -4, -1, -2, 0, 0}; {7, 0, -5, 4, 6, -2, 2, -5, -3, -1, 0, 0}; {-7, -1, 7, -3, -4, 1, 2, -7, 5, 2, 0, 0}; {8, -2, 6, -4, -5, 1, -1, 6, 5, 3, 0, 0}; {-6, 4, 0, -6, -3, 7, -4, 6, -6, -3, 0, 0}; {-7, 2, -3, 6, -7, 1, 4, -4, -2, -2, 0, 0}; {8, -2, 6, -4, -4, 1, 1, 8, 5, 2, 0, 0}; {1, -7, 3, -5, -3, 4, 7, -1, -1, 0, 0, 0}; {1, -7, 3, -5, -3, 4, 7, -1, -1, 1, 0, 0}; {6, -4, 4, -6, -6, 0, -1, 6, 4, 3, 0, 0}; {-1, 4, -5, 0, -1, 5, 1, -7, 6, 3, 0, 0}; {-2, 5, -2, 5, 7, -4, -3, 6, 3, 0, 0, 0}; {-3, 4, -3, 4, 6, -4, -4, 3, 2, 1, 0, 0}; {-4, 3, -4, 3, 5, -5, -5, 2, 2, 2, 0, 0}; {2, -6, 4, -4, -1, 6, 8, 0, 0, -1, 0, 0}; {5, -5, 3, -7, -6, 0, -1, 6, 4, 2, 0, 0}; {6, -4, 4, -6, -4, 1, 0, 8, 5, 1, 0, 0}; {-2, 6, 0, 8, -3, -5, -5, -3, -7, 8, 0, 0}; {2, -6, 4, -4, 1, 7, 8, 2, 0, -2, 0, 0}; {5, -5, 3, -7, -4, 0, -1, 7, 4, 0, 0, 0}; {8, 0, -6, 3, 8, 8, 8, -5, 7, 7, 0, 0}; {6, -2, 8, 1, 6, 8, 8, -6, 7, 6, 0, 0}; {2, -7, 2, -6, -1, -4, -4, -1, -7, -7, 0, 0}; {0, 7, 0, 8, -3, -4, -4, -2, -7, 8, 0, 0}; {1, 8, 1, -7, -1, -4, -4, -2, -7, 8, 0, 0}; {0, 7, 0, 8, -2, -3, -4, -2, -7, 8, 0, 0}; {-4, 3, -4, 4, -6, -6, -5, -4, 8, 7, 0, 0}; {-7, 0, -7, 1, 7, 7, 0, 0, -4, -3, 0, 0}; {0, 8, 2, -5, 2, 4, 7, -7, 7, 6, 0, 0}; {0, 6, -2, 5, -6, -3, -3, 5, 2, -2, 0, 0}; {7, -2, 7, -1, 6, 6, -5, -5, 4, 3, 0, 0}; {6, -4, 4, -5, 1, 0, -7, 5, 1, -1, 0, 0}; {7, -2, 7, -1, 6, 7, -6, -5, 8, 7, 0, 0}; {3, -6, 3, -5, 2, 3, -6, -6, 2, 1, 0, 0}; {-1, 5, -3, 4, -6, -4, -3, 5, 2, -2, 0, 0}; {4, -5, 4, -4, 3, 6, -7, -4, -7, 7, 0, 0}; {-2, 4, -4, 3, -6, -7, -1, -1, 4, 3, 0, 0}; {5, -5, 3, -6, 2, -1, -2, -1, -5, -6, 0, 0}; {5, -4, 5, -3, 6, 6, -6, -5, 3, 3, 0, 0}; {-2, 4, -4, 3, -5, -6, -2, -3, 6, 4, 0, 0}; {-3, 3, -5, 2, -6, -7, -2, -2, 4, 3, 0, 0}; {-7, 0, -7, 1, -5, 8, 7, -3, 0, 3, 0, 0}; {-7, 0, -7, 1, -5, -6, 5, 5, -3, -2, 0, 0}; {-2, 4, -4, 3, -4, -6, -1, -1, 5, 4, 0, 0}; {7, -2, 7, -1, -7, -7, 5, 4, -3, -3, 0, 0}; {2, -7, 2, -6, 4, 4, -7, -6, 2, 2, 0, 0}; {-4, 2, -6, 1, -6, -7, -3, -3, 4, 3, 0, 0}; {2, -7, 2, -6, 4, 4, -7, -6, 2, 3, 0, 0}; {7, -2, 7, -1, -6, -7, 4, 4, -4, -2, 0, 0}; {-4, 3, -4, 4, 0, 3, 2, 0, 8, 8, 0, 0}; {4, -6, 2, -7, 4, 6, 5, 2, -7, -7, 0, 0}; {-7, 0, -7, 1, -2, 1, 1, -1, 7, 7, 0, 0}; {2, 8, 0, 7, 3, 5, 5, 1, -6, -7, 0, 0}; {-5, 1, -7, 0, -3, 3, 4, -7, 6, 3, 0, 0}; {-5, 1, -7, 0, -3, 3, 4, -7, 6, 4, 0, 0}; {-1, 6, -1, 7, 5, -4, -2, 4, 3, 1, 0, 0}; {-2, 5, -2, 6, 4, -5, -3, 3, 3, 2, 0, 0}; {-7, -1, 7, -2, -5, 1, 2, 8, 5, 2, 0, 0}; {-3, 4, -3, 5, 3, -6, -4, 3, 2, 1, 0, 0}; {-2, 4, -4, 3, 0, -6, 3, 4, 6, 5, 0, 0}; {-1, 6, -1, 7, 6, -3, -3, 2, 4, 1, 0, 0}; {-7, -1, 7, -2, -4, 2, 1, 6, 6, 3, 0, 0}; {3, 8, -1, 5, 2, 7, 5, -5, 8, 4, 0, 0}; {-7, 2, -3, 7, 8, 1, 4, -5, -1, -2, 0, 0}; {3, -5, 5, -2, -2, 6, 8, -2, 1, 0, 0, 0}; {3, 8, -1, 5, 2, 7, 6, -5, 8, 4, 0, 0}; {-4, 3, -4, 4, 3, -6, -5, 2, 2, 1, 0, 0}; {-3, 4, -3, 5, 4, -5, -3, 4, 2, 1, 0, 0}; {0, 8, 2, -5, -5, 3, 6, -2, -1, 0, 0, 0}; {-7, -1, 7, -2, -4, 3, 1, 6, 6, 3, 0, 0}; {7, -3, 5, -4, -6, 1, -1, 5, 5, 2, 0, 0}; {2, 7, -2, 4, 2, 6, 6, -4, 8, 4, 0, 0}; {-4, 3, -4, 4, 4, -5, -5, 1, 3, 1, 0, 0}; {-4, 3, -4, 4, 4, -5, -5, 1, 3, 2, 0, 0}; {-4, 3, -4, 4, 4, -5, -4, 3, 2, 1, 0, 0}; {6, -4, 4, -5, -6, 0, 0, 6, 4, 2, 0, 0}; {6, -4, 4, -5, -6, 0, 0, 6, 4, 3, 0, 0}; {-5, 2, -5, 3, 3, -6, -5, 2, 2, 1, 0, 0}; {5, -5, 3, -6, -7, -1, -1, 6, 4, 3, 0, 0}; {0, 8, 2, -5, -4, 4, 7, -1, -1, -1, 0, 0}; {-6, 1, -6, 2, 2, -7, -5, 3, 1, 0, 0, 0}; {6, -4, 4, -5, -6, 1, -1, 5, 5, 2, 0, 0}; {0, 5, -4, 2, 1, 6, 4, -6, 7, 3, 0, 0}; {1, -7, 3, -4, -2, 6, 8, -1, 0, -2, 0, 0}; {-5, 2, -5, 3, 4, -5, -4, 3, 2, 0, 0, 0}; {5, -5, 3, -6, -6, 0, 0, 6, 4, 2, 0, 0}; {-3, 5, -1, 8, -6, 2, 5, -3, -2, 0, 0, 0}; {-5, 2, -5, 3, 5, -4, -4, 3, 2, 1, 0, 0}; {-4, 1, 8, -2, -1, -6, 7, -4, -7, 1, 0, 0}; {3, -7, 1, 8, -6, -1, -1, 6, 4, 1, 0, 0}; {0, 6, -2, 6, 8, -2, -2, 4, 3, 0, 0, 0}; {6, -3, 6, -1, 3, -7, -6, 2, 0, -2, 0, 0}; {2, -7, 2, -5, -1, -3, -4, -1, -7, -7, 0, 0}; {1, 8, 1, -6, -2, -4, -4, -1, -7, -7, 0, 0}; {-5, 1, -7, 1, 4, 1, 0, 2, -5, -6, 0, 0}; {-4, 4, -2, 8, -3, 1, -5, -5, -7, -7, 0, 0}; {-1, 5, -3, 5, -7, -3, -3, 6, 3, -1, 0, 0}; {0, 7, 0, -7, -2, -6, -6, -2, -7, 8, 0, 0}; {-1, 6, -1, 8, -3, -5, -5, -2, 8, 8, 0, 0}; {0, 7, 0, -7, -2, -4, -3, -2, -7, 8, 0, 0}; {4, -4, 6, 0, 6, 6, 7, -6, 6, 6, 0, 0}; {-2, 5, -2, 7, -4, -5, -5, -3, 8, 8, 0, 0}; {4,-7, 0, 7, -6, 7, 0, -7, 5, 0, 0, 0}; {3, -5, 5, -1, 5, 6, 7, -7, 6, 6, 0, 0}; {8, 1, -4, 7, -2, 0, 2, 5, 4, 4, 0, 0}; {8, 0, -6, 4, -6, -1, 4, 8, 6, 4, 0, 0}; {8, 0, -6, 4, -5, 0, 4, 8, 6, 4, 0, 0}; {-2, 5, -2, 7, -3, -5, -5, -2, 8, 8, 0, 0}; {8, -2, 6, -2, 3, 0, -1, 1, -6, -7, 0, 0}; {-2, 5, -2, 7, -3, -4, -5, -3, 8, 8, 0, 0}; {-7, 0, -7, 2, 8, 8, -6, -5, 7, 7, 0, 0}; {-2, 4, -4, 4, -7, 8, -2, -3, 5, 4, 0, 0}; {-3, 3, -5, 3, 8, 8, -1, -2, 5, 3, 0, 0}; {-6, 1, -6, 3, -6, -7, -6, -4, 7, 7, 0, 0}; {-3, 3, -5, 3, -7, -7, -1, -2, 5, 3, 0, 0}; {0, 7, 0, -7, 0, 1, -7, -7, 1, 1, 0, 0}; {0, 7, 0, -7, 0, 1, -7, -6, 1, 1, 0, 0}; {-6, 0, 8, 0, 6, 7, -3, -4, 5, 2, 0, 0}; {-5, 1, -7, 1, 7, 8, -2, -2, 4, 2, 0, 0}; {-7, -1, 7, -1, 6, -7, -6, 3, 0, -3, 0, 0}; {6, -4, 4, -4, 3, 0, -2, -1, -5, -6, 0, 0}; {4, -6, 2, -6, 1, -2, -3, -1, -6, -7, 0, 0}; {7, -3, 5, -3, 4, 3, -4, -5, 2, 1, 0, 0}; {-5, 2, -5, 4, -4, -4, 7, 7, -2, -1, 0, 0}; {-6, 1, -6, 3, -5, -5, 6, 6, -2, -1, 0, 0}; {-2, 5, -2, 7, -1, 0, 8, -7, 0, 1, 0, 0}; {-2, 5, -2, 7, 0, 1, 7, 8, 1, 2, 0, 0}; {-7, -1, 7, -1, 7, 5, -3, -3, 2, 2, 0, 0}; {-7, -1, 7, -1, 7, 6, -3, -3, 2, 2, 0, 0}; {-4, 2, -6, 2, -6, -7, -3, -3, 5, 4, 0, 0}; {-4, 2, -6, 2, -6, -7, -3, -3, 6, 5, 0, 0}; {-5, 1, -7, 1, -7, 8, -3, -3, 4,

3, 0, 0}; {-6, 0, 8, 0, 8, 7, -4, -4, 4, 3, 0, 0}; {-5, 1, -7, 1, -7, 8, -2, -2, 4, 3, 0, 0}; {-7, -1, 7, -1, 8, 7, -3, -3, 3, 3, 0, 0}; {-6, 0, 8, 0, -7, 8, -3, -3, 4, 3, 0, 0}; {-7, -1, 7, -1, 8, 7, -4, -4, 4, 3, 0, 0}; {8, -2, 6, -2, 7, 7, -4, -5, 4, 2, 0, 0}; {7, -3, 5, -3, 6, 6, -5, -5, 3, 2, 0, 0}; {-1, 6, -1, 8, 2, 3, 6, 7, 6, 6, 0, 0}; {2, 8, 0, 8, 1, -2, 8, 7, 0, 0, 0, 0}; {-5, 3, -3, 7, 2, 1, 1, 8, -3, 1, 0, 0}; {7, -3, 5, -3, 7, 6, -5, -5, 3, 2, 0, 0}; {-5, 2, -5, 4, 1, -7, -5, 2, 2, 1, 0, 0}; {-4, 3, -4, 5, 4, -5, -4, 1, 3, 1, 0, 0}; {0, 5, -4, 3, 0, 5, 5, -6, 6, 3, 0, 0}; {0, 5, -4, 3, 0, 6, 4, 8, 7, 4, 0, 0}; {3, -7, 1, -7, 7, -2, -1, 6, 3, 1, 0, 0}; {5, -5, 3, -5, -6, 0, -1, 4, 5, 3, 0, 0}; {-6, 1, -6, 3, 3, -6, -5, 0, 3, 1, 0, 0}; {-1, 7, 1, -5, -4, 4, 7, -4, 0, -1, 0, 0}; {-3, 2, -7, 0, -2, 4, 1, 7, 6, 4, 0, 0}; {-2, 3, -6, 1, -1, 5, 3, 7, 6, 5, 0, 0}; {-7, -2, 5, -4, -5, 2, -2, 6, 5, 2, 0, 0}; {7, -4, 3, -6, -6, 1, -3, 6, 4, 1, 0, 0}; {-4, 1, 8, -1, -1, 4, 3, -7, 6, 2, 0, 0}; {1, 7, -1, 7, 8, -2, -2, 5, 3, 0, 0, 0}; {-1, 5, -3, 6, 7, -3, -2, 6, 3, -1, 0, 0}; {3, -6, 3, -3, 1, 7, 8, 2, 0, -3, 0, 0}; {-4, 2, -6, 3, 6, -4, -4, 4, 2, -1, 0, 0}; {4, -5, 4, -2, 3, 8, -7, 2, -1, -2, 0, 0}; {-4, 3, -4, 6, -5, -6, -5, -3, 8, 7, 0, 0}; {-5, 2, -5, 5, -6, -5, -6, -4, 8, 7, 0, 0}; {-5, 2, -5, 5, -5, -7, -6, -4, 8, 7, 0, 0}; {5, -5, 3, -4, 1, -1, -2, 0, -6, -7, 0, 0}; {6, -5, 2, -6, -2, -4, 3, 1, 7, 5, 0, 0}; {-6, 0, 8, 1, 6, 7, -2, -3, 5, 2, 0, 0}; {-5, 2, -5, 5, -4, -2, 7, 7, 0, 0, 0, 0}; {5, -5, 3, -4, 2, -1, -2, -1, -6, -7, 0, 0}; {4, -6, 2, -5, 1, -2, -3, -1, -6, -7, 0, 0}; {-7, 0, -7, 3, -6, 8, -7, -4, 7, 7, 0, 0}; {3, -7, 1, -6, 0, -2, -3, -2, -6, -7, 0, 0}; {3, -7, 1, -6, 0, -2, -3, -1, -7, 8, 0, 0}; {3,-7, 1, -6, 0, -2, -3, -1, -6, -7, 0, 0}; {-7, 0, -7, 3, -6, -7, -7, -3, 2, 4, 0, 0}; {8, -2, 6, -1, 5, 5, -3, -4, 3, 2, 0, 0}; {7, -3, 5, -2, 5, 5, -4, -4, 3, 2, 0, 0}; {-2, 3, -6, 2, 8, 4, 1, 1, -3, -5, 0, 0}; {2, 8, 0, -7, 0, -3, -4, -2, -6, -7, 0, 0}; {2, 8, 0, -7, 0, -2, -3, -1, -7, -7, 0, 0}; {-7, 0, -7, 3, -5, -5, 6, 7, -2, 0, 0, 0}; {7, -3, 5, -2, 6, 5, -4, -3, 2, 2, 0, 0}; {-5, 1, -7, 2, -6, -7, -5, -4, 8, 8, 0, 0}; {-7, -1, 7, 0, 8, 7, -4, -4, 4, 3, 0, 0}; {-1, 5, -3, 6, -2, -5, -5, -3, -7, 8, 0, 0}; {3, -7, 1, -6, 2, 0, -6, -6, 0, 1, 0, 0}; {2, 8, 0, -7, 1, -1, -6, -7, 0, 0, 0, 0}; {8, -2, 6, -1, 8, 7, -4, -4, 4, 3, 0, 0}; {6, -4, 4, -3, 6, 5, -5, -4, 2, 2, 0, 0}; {8, -2, 6, -1, 8, 7, -5, -4, 3, 3, 0, 0}; {6, -4, 4, -3, 6, 6, -5, -5, 3, 2, 0, 0}; {4, -6, 2, -5, 4, 5, -5, -5, 2, 1, 0, 0}; {0, 5, -4, 4, -3, -4, -1, -1, 6, 4, 0, 0}; {1, 6, -3, 5, 0, 6, 6, -6, 7, 4, 0, 0}; {1, 8, 1, -5, -7, -3, -3, -2, 5, 6, 0, 0}; {4, -6, 2, -5, 8, -1, -1, 4, 4, 2, 0, 0}; {0, 5, -4, 4, 0, 6, 5, -7, 7, 4, 0, 0}; {0, 5, -4, 4, 0, 6, 5, -7, 7, 5, 0, 0}; {-1, 4, -5, 3, -1, 5, 5, -7, 7, 5, 0, 0}; {-2, 3, -6, 2, -2, 4, 4, -7, 6, 3, 0, 0}; {8, -2, 6, -1, -3, 4, 1, 4, 6, 4, 0, 0}; {5, -5, 3, -4, -6, 1, 0, 4, 5, 3, 0, 0}; {4, -6, 2, -5, -7, 0, -1, 4, 5, 2, 0, 0}; {3, -7, 1, -6, 8, -1, -1, 4, 4, 1, 0, 0}; {8, -4, 2, -7, 5, -6, -7, -4, -7, 5, 0, 0}; {-4, 1, 8, 0, -3, 3, 3, -7, 5, 3, 0, 0}; {6, -4, 4, -2, 2, 5, -3, -4, 4, 1, 0, 0}; {7, -3, 5, -1, 4, 5, -3, -4, 4, 2, 0, 0}; {5, -5, 3, -3, 2, -7, -7, 1, -2, -4, 0, 0}; {8, -1, 8, 3, -7, 8, -7, -4, 6, 6, 0, 0}; {8, -1, 8, 3, -7, 8, -7, -4, 7, 7, 0, 0}; {3, 8, -1, 8, -4, -5, 2, 0, 7, 4, 0, 0}; {2, 8, 0, -6, 0, -2, -4, -2, -7, -7, 0, 0}; {-1, 5, -3, 7, -3, -4, -5, -3, -7, 8, 0, 0}; {6, -4, 4, -2, 5, 4, -5, -5, 3, 3, 0, 0}; {6, -3, 6, 1, -7, -7, 5, 6, -3, 0, 0, 0}; {3, -6, 3, -2, 6, 8, 4, 4, -3, -2, 0, 0}; {-2, 3, -6, 3, -7, 6, -1, -3, 4, 3, 0, 0}; {-7, -2, 5, -2, 4, 1, 0, 0, -5, -6, 0, 0}; {-3, 3, -5, 5, -4, -6, -6, -4, 8, 8, 0, 0}; {0, 5, -4, 5, -4, -5, -1, -2, 6, 4, 0, 0}; {4, 8, -2, 6, -4, 7, 3, 2, -2, -4, 0, 0}; {-2, 3, -6, 3, -5, -7, -1, -1, 4, 3, 0, 0}; {4, -6, 2, -4, 6, 5, -6, -5, 2, 2, 0, 0}; {-2, 3, -6, 3, -4, -6, -2, -2, 5, 3, 0, 0}; {7,-5, 1, -7, 4, -7, 8, -5, 8, 5, 0, 0}; {-3, 3, -5, 5, 2, -6, -4, 3, 1, 1, 0, 0}; {-1, 4, -5, 4, 1, 7, 4, 7, 7, 5, 0, 0}; {6, -6, 0, 8, 4, -7, 8, -6, 8, 6, 0, 0}; {-5, 0, 7, 0, -3, 3, 3, 6, 5, 5, 0, 0}; {4, -5, 4, 0, 6, 6, 7, -6, 6, 6, 0, 0}; {6, -6, 0, -7, 3, -7, 8, -5, 8, 6, 0, 0}; {5, -6, 1, -4, 0, -6, -7, -2, -5, 8, 0, 0}; {8, 1, -4, -4, 3, -3, 2, 4, 6, 0, 0, 0}; {5, -2, -7, -7, 1, -5, 1, 3, 5, -1, 0, 0}; {5, -2, -7, -7, 2, -5, 0, 2, 5, -1, 0, 0}; {-2, 6, 0, -1, 7, 0, 4, 5, 7, 0, 0, 0}; {6, 8, -4, 5, -4, 8, 1, 8, 8, 4, 0, 0}; {8, -7, -4, 5, 3, -7, 1, -5, -2, 5, 0, 0}; {-2, -2, 0, 8, 5, -4, 4, -3, 0, 6, 0, 0}; {6, 8, -4, 6, -4, -7, 1, 8, 8, 4, 0, 0}; {-4, -1, 4, -1, 6, 4, -3, 5, 6, 4, 0, 0}; {6, 8, -4, 6, -4, -7, 1, 8, 8, 5, 0, 0}; {6, 8, -4, 6, -4, -7, 1, -7, 8, 6, 0, 0}; {5, 7, -5, 5, -5, 8, 0, 8, 8, 4, 0, 0}; {0, 2, 6, 1, 8, 6, -2, 5, 8, 4, 0, 0}; {5, 4, 5, -3, -7, -1, 7, 0, 1, 8, 0, 0}; {7, 4, 3, -7, 3, 7, -1, 7, 6, -5, 0, 0}; {6, 7, -6, 4, 3, 8, 1, -6, -3, 7, 0, 0}; {6, 1, -2, 2, -5, -4, 4, -5, -4, -4, 0, 0}; {1, 5, -5, 8, 0, -2, 8, 1, 4, 1, 0, 0}; {5, -6, 1, 0, -7, 8, 3, -3, 1, -1, 0, 0}; {3, 6, -5, 8, 0, -1, 8, 0, 5, 2, 0, 0}; {7, 4, 3, -6, 3, 8, -1, 7, 6, -5, 0, 0}; {-3, -5, -5, 3, -2, 3, -5, 3, 3, -6, 0, 0}; {4, 1, 0, 8, 1, 7, -2, 6, 6, -5, 0, 0}; {-7, 1, -5, -1, -1, 7, 1, 3, 6, 5, 0, 0}; {7, -1, -7, -3, 1, 3, -5, 5, 2, 1, 0, 0}; {-5, 4, -1, 4, -6, -4, 5, 1, -1, -1, 0, 0}; {8, 1, -4, 1, 7, -6, 3, 1, -2, -1, 0, 0}; {7, 0, -5, 0, 6, -7, 2, 0, -3, -1, 0, 0}; {6, -1, -6, -1, 5, -7, 2, 0, -3, -2, 0, 0}; {5, -2, -7, -2, 5, 8, 2, 0, -3, -2, 0, 0}; {-7, 2, -3, 3, -3, 2, 4, 1, 5, 7, 0, 0}; {3, -5, 5, -6, 3, 7, 8, 5, 7, -7, 0, 0}; {2, 4, 8, 7, 0, -5, 4, -6, 3, 4, 0, 0}; {0, -6, 6, -3, 4, 5, -1, -2, -4, -2, 0, 0}; {-2, 8, 4, -5, 2, 4, -1, -3, -4, -3, 0, 0}; {-4, 3, -4, 0, 4, 4, -4, 7, 3, 2, 0, 0}; {0, 8, 2, 7, -4, -2, 7, 3, 0, 0, 0, 0}; {4, -3, 8, -2, 4, 7, 1, -1, -3, -3, 0, 0}; {-3, 7, 3, -6, 2, 3, -3, -2, -5, -2, 0, 0}; {-7, 3, -1, 6, -2, 1, -4, -3, -6, -4, 0, 0}; {-7, 3, -1, 6, -2, 2, -4, -3, -5, -4, 0, 0}; {3, -4, 7, -3, 4, 7, 1, 0, -3, -3, 0, 0}; {1, -6, 5, -5, 2, 5, -1, -2, -4, -3, 0, 0}; {-4, 3, -3, 1, 0, -7, 2, 4, 7, 6, 0, 0}; {-2, 6, 1, 6, 7, 4, -5, -1, 4, 5, 0, 0}; {5, -2, -6, 0, 6, 8, 2, -1, -2, -2, 0, 0}; {-2, 6, 1, 6, -5, -3, 6, 2, 0, 0, 0, 0}; {-2, 6, 1, 6, -4, -4, 5, 3, -1, 1, 0, 0}; {5, -1, -4, 3, -4, -1, -6, -5, -7, -4, 0, 0}; {-7, 0, -6, -1, -2, 7, 1, 3, 6, 5, 0, 0}; {-6, 3, -1, 6, -4, 1, -5, -5, -6, -6, 0, 0}; {-3, 5, 0, 6, -4, -5, 5, 2, -1, 0, 0, 0}; {-5, 3, -2, 4, -6, -6, 4, 1, -2, 0, 0, 0}; {5, -1, -4, 4, -4, -1, -6, -6, -7, -4, 0, 0}; {7, 0, -4, 4, -5, -1, -6, -5, -7, -6, 0, 0}; {1, 8, 2, 8, -1, -3, -4, -1, -6, -7, 0, 0}; {-1, 6, 0, 6, -2, -4, -4, -2, -6, -7, 0, 0}; {1, 7, 0, 5, -4, -5, 0, -1, 5, 3, 0, 0}; {7, -3, 6, -5, 4, 0, -1, 1, -5, -5, 0, 0}; {-7, 2, -2, 6, 3, 7, -4, 4, 7, 1, 0, 0}; {-6, -4, 1, 2, -5, 7, 0, 7, 0, 3, 0, 0}; {1, 8, 2, 8, 7, -3, -1, 6, 3, 2, 0, 0}; {4, -5, 5, -5, -6, 6, -2, 1, 5, 5, 0, 0}; {2, -6, 5, -4, -3, 2, -3, 0, 5, 4, 0, 0}; {-5, 2, -4, 2, 4, -6, -5, 3, 2, 1, 0, 0}; {6, -3, 7, -2, 2, 8, -7, 3, 1, -2, 0, 0}; {-3, 3, -4, 2, 6, 4, -2, 7, 4, 0, 0, 0}; {7, -2, 8, -1, 4, -7, -6, 4, 1, -2, 0, 0}; {7, -2, 8, -1, 5, -7, -6, 3, 0, -2, 0, 0}; {-4, 5, 1, -6, 3, -7, -1, 4, 5, 4, 0, 0}; {-3, 4, -2, 5, -4, -5, -5, -3, -7, 8, 0, 0}; {-3, 3, -4, 2, 8, 8, -1, -2, 4, 2, 0, 0}; {3, -6, 4, -5, 2, 4, -5, -5, 2, 1, 0, 0}; {1, 8, 2, -7, 0, 2, -6, -6, 1, 0, 0, 0}; {0, 6, -1, 5, -4, -5, -1, -2, 6, 4, 0, 0}; {0, 5, -3, 2, -7, 5, 3, 3, -3, -4, 0, 0}; {-2, 4, -3, 3, -5, -7, -2, -2, 4, 4, 0, 0}; {4, -6, 3, -7, 5, 7, 5, 2, -6, -7, 0, 0}; {3, -5, 6, -2, -3, 4, 8, -1, 1, 1, 0, 0}; {-6, 0, -7, -1, -4, 2, 2, 8, 6, 3, 0, 0}; {-2, -2, 1, 1, -7, 2, -6, -2, 6, 5, 0, 0}; {-2, 5, -1, 6, 5, -5, -3, 4, 3, 1, 0, 0}; {8, -2, 7, -3, -5, 0, 1, 8, 6, 2, 0, 0}; {6, -1, -5, 4, 5, -3, 2, -5, -2, -1, 0, 0}; {1, -7, 4, -4, -4, 3, 7, -1, 0, 1, 0, 0}; {8,-2, 7, -3, -5, 1, 0, 7, 6, 2, 0, 0}; {-3, 4, -2, 5, 4, -5, -4, 3, 3, 1, 0, 0}; {-4, 3, -3, 4, 3, -6, -5, 2, 3, 1, 0, 0}; {7, -3, 6, -4, -5, 0, 1, 8, 5, 3, 0, 0}; {-4, 3, -3, 4, 4, -6, -3, 4, 2, 1, 0, 0}; {-4, 3, -3, 4, 4, -6, -3, 4, 2, 2, 0, 0}; {-5, 2, -4, 3, 3, -7, -4, 3, 2, 2, 0, 0}; {-5, 2, -4, 3, 3, -7, -4, 4, 2, 1, 0, 0}; {6, -4, 5, -5, -6, 0, -1, 6, 5, 3, 0, 0}; {8, -1, -7, 0, 1, 5, 0, 2, 7, 5, 0, 0}; {3, -7, 2, 8, -7, -2, -1, 6, 4, 2, 0, 0}; {-7, 0, -6, 1, 3, -7, -5, 4, 2, -1, 0, 0}; {-2, 3, -5, 0, 0, 5, 3, -6, 7, 3, 0, 0}; {-2, 6, 1, -7, -3, 4, 6, -1, -1, -2, 0, 0}; {-3, 6, 2, -4, 1, 8, 5, 5, -2, 0, 0, 0}; {-2, 6, 1, -6, -1, 5, 7, 0, -2, -2, 0, 0}; {7, -1, -6, 3, -6, -1, 4, 7, 6, 5, 0, 0}; {-4, 2, -5, 2, 7, -5, -4, 4, 1, -2, 0, 0}; {6, -2, -7, 2, -7, -1, 3, 7, 5, 4, 0, 0}; {-2, 5, -1, 7, -3, -6, -6, -2, 8, 8, 0, 0}; {3, 8, 0, 6, -6, 6, 2, -7, 6, 0, 0, 0}; {-2, 5, -1, 7, -3, -5, -5, -3, -7, 8, 0, 0}; {-3, 4, -2, 6, -4, -6, -6, -3, 8, 8, 0, 0}; {-1, 7, 2, -5, 2, 4, 6, 8, 6, 5, 0, 0}; {-5, 1, -6, 1, 6, 8, -2, -3, 5, 2, 0, 0}; {-1, 8, 4, -2, 7, -4, 0, 3, 4, 2, 0, 0}; {-3, 3, -4, 3, -7, -4, -4, 5, 1, -2, 0, 0}; f 4, -4, 7, 0, 8, -3, 2, 7, 7, 5, 0, 0}; {-3, 5, 0, -7, 1, 3, 5, 7, 6, 5, 0, 0}; {-5, 3, -2, 7, -1, 1, 4, 6, 5, 4, 0, 0}; {8, 0, -5, 4, -3, 0, 3, 5, 5, 4, 0, 0}; {6, -4, 5, -4, 3, 0, -1, 0, -5, -6, 0, 0}; {-7, -1, 8, -1, 6, 6, -3, -3, 3, 2, 0, 0}; {2, -7, 3, -5, 3, 4, -7, -7, 3, 2, 0, 0}; {-6, 0, -7, 0, 7, 7, -4, -4, 4, 3, 0, 0}; {8,-2, 7, -2, 6, 6, -4, -4, 3, 2, 0, 0}; {-5, 1, -6, 1, -7, -7, -3, -3, 4, 3, 0, 0}; {-5, 1, -6, 1, -7, -7, -2, -3, 5, 3, 0, 0}; {0, 6, -1, 6, -2, -4, -3, -2, -7, -7, 0, 0}; {-7, -1, 8, -1, 7, 6, -4, -4, 3, 2, 0, 0}; {3, 8, 0, 6, -2, -4, 1, 0, 6, 4, 0, 0}; {1, 7, 0, 7, 0, -1, -7, 8, 0, -1, 0, 0}; {-6, 0, -7, 0, -7, -7, -5, -4, 8, 7, 0, 0}; {-4, 1, -7, -1, 7, 3, 1, 2, -4, -5, 0, 0}; {3, 8, 0, 6, -1, -3, 1, 0, 7, 5, 0, 0}; {1, 7, 0, 7, 2, 5, 5, 1, 8, 8, 0, 0}; {-5, 2, -4, 4, 2, -7, -5, 2, 3, 1, 0, 0}; {-5, 2, -4, 4, 2, -7, -5, 2, 3, 2, 0, 0}; {6, -4, 5, -4, -7, -1, 0, 6, 5, 2, 0, 0}; {6, -4, 5, -4, -7, -1, 0, 6, 5, 3, 0, 0}; {-5, 2, -4, 4, 2, -7, -5, 2, 2, 1, 0, 0}; {5, -5, 4, -5, -7, -1, -1, 5, 5, 3, 0, 0}; {6, -4, 5, -4, -6, 0, 0, 6, 5, 2, 0, 0}; {0, 8, 3, -4, -4, 4, 7, -2, 0, -1, 0, 0}; {4, -6, 3, -6, 8, -2, -1, 5, 4, 3, 0, 0}; {5, -5, 4, -5, -7, -1, 0, 7, 5, 1, 0, 0}; {5, -5, 4, -5, -7, -1, 0, 7, 5, 2, 0, 0}; {5, -5, 4, -5, -7, -1, 0, 7, 4, 2, 0, 0}; {5, -5, 4, -5, -7, -1, 1, 7, 5, 2, 0, 0}; {5, -5, 4, -5, -7, -1, 1, 7, 5, 3, 0, 0}; {4, -6, 3, -6, 8, -2, 0, 6, 5, 3, 0, 0}; {-7, 0, -6, 2, 1, 8, -5, 2, 2, 2, 0, 0}; {0, -4, -5, 8, -3, 4, -7, -7, -2, -6, 0, 0}; {4, -6, 3, -6, -7, -1, 0, 7, 4, 2, 0, 0}; {3, -7, 2, -7, 8, -2, -1, 6, 4, 1, 0, 0}; {3, -7, 2, -7, 8, -2, -1, 6, 4, 2, 0, 0}; {8, -1, -7, 1, 1, 8, -6, 2, 1, 0, 0, 0}; {3, -7, 2, -7, 8, -2, -1, 6, 4, 3, 0, 0}; {-3, 5, 0, -7, -6, 2, 5, -2, -1, -2, 0, 0}; {2, 8, 1, 8, 7, -3, -1, 6, 3, 2, 0, 0}; {7, -2, 8, 0, 0, 7, -6, 2, 1, 0, 0, 0}; {3, -7, 2, -7, 8, -1, -2, 4, 5, 2, 0, 0}; {-4, 1, -7, -1, -3, 3, 1, 8, 6, 3, 0, 0}; {-4, 1, -7, -1, -3, 3, 1, 8, 6, 4, 0, 0}; {-5, 0, 8, -2, -4, 3, -1, 7, 6, 2, 0, 0}; {-6, 1, -5, 3, 4, -6, -4, 5, 2, 0, 0, 0}; {2, 8, 1, 8, 8, -2, -2, 5, 4, 1, 0, 0}; {2, 8, 1, 8, 8, -2, -1, 6, 3, 1, 0, 0}; {2, 8, 1, 8, 8, -2, -1, 6, 4, 1, 0, 0}; {7, -2, 8, 0, 1, 8, -6, 2, 1, -1, 0, 0}; {7, -2, 8, 0, 1, 8, -6, 2, 1, 0, 0, 0}; {1, 7, 0, 7, 7, -3, -2, 5, 3, 2, 0, 0}; {1, 7, 0, 7, 7, -2, -3, 4, 4, 1, 0, 0}; {-4, 4, -1, 8, -5, 3, 5, -2, -1, -2, 0, 0}; {-5,0, 8, -2, -2, 3, 2, -7, 6, 2, 0, 0}; {-2, 4, -3, 5, 7, -3, -3, 4, 2, 0, 0, 0}; {-7, 2, -2, -7, -2, 5, 3, 4, -3, 0, 0, 0}; {-5, 1, -6, 2, 6, -5, -5, 5, 2, -2, 0, 0}; {-4, 2, -5, 3, 7, -4, -4, 5, 2, -1, 0, 0}; {-4, 3, -3, 6, -5, -7, -7, -3, 8, 8, 0, 0}; {1, -7, 4, -2, 4, 4, 6, -7, 6, 6, 0, 0}; {-5, 2, -4, 5, -5, -6, -6, -4, 8, 8, 0, 0}; {8, -1, -7, 2, 8, -7, -7, -6, 8, 7, 0, 0}; {8, -2, 7, -1, 5, 6, -3, -4, 4, 2, 0, 0}; {6, -4, 5, -3, 3, 4, -4, -5, 3, 1, 0, 0}; {-4, 5, 1, -4, 5, -6, -1, 3, 4, 1, 0, 0}; {4, -6, 3, -5, 1, -2, -3, -1, -6, -7, 0, 0}; {3, -7, 2, -6, 0, -2, -3, -1, -6, -7, 0, 0}; {-7, -1, 8, 0, 6, 5, -3, -3, 3, 3, 0, 0}; {4, -5, 5, -2, 5, 6, 8, -7, 7, 6, 0, 0}; {7, -3, 6, -2, 5, 5, -4, -4, 3, 2, 0, 0}; {-7, -1, 8, 0, 7, 7, -4, -5, 5, 3, 0, 0}; {8,-2, 7, -1, 6, 6, -5, -5, 4, 3, 0, 0}; {6, -4, 5, -3, 4, 5, -5, -5, 3, 2, 0, 0}; {2, 7, -1, 6, -4, -2, -2, 6, 2, -2, 0, 0}; {5, -5, 4, -4, 3, 7, 8, 2, -1, -4, 0, 0}; {2, 8, 1, -7, 0, -3, -4, -2, -6, -7, 0, 0}; {-4, 1, -7, 0, 6, 3, 1, 1, -4, -5, 0, 0}; {6, -4, 5, -3, 4, 3, -5, -5, 2, 2, 0, 0}; {1, 7, 0, 8, 0, -1, -7, 8, 0, 0, 0, 0}; {6, -4, 5, -3, 5, 5, -5, -5, 3, 2, 0, 0}; {0, 5, -3, 4, -5, -6, 0, -1, 5, 3, 0, 0}; {-7, 0, -6, 3, -4, -2, 6, 7, -1, 0, 0, 0}; {3, -7, 2, -6, 2, 3, -6, -6, 2, 1, 0, 0}; {-4, 3, -3, 6, -1, 1, 5, 6, 5, 5, 0, 0}; {-5, 0, 8, -1, 6, 2, 0, 2, -4, -5, 0, 0}; {7, -4, 4, -5, 3, 0, -1, 0, -5, -6, 0, 0}; {-4, 2, -5, 3, -4, -6, -6, -4, -7, 8, 0, 0}; {-6, -1, 7, -2, 6, 2, 0, 1, -4, -5, 0, 0}; {5, -5, 4, -4, 6, 6, -5, -5, 3, 3, 0, 0}; {7, -4, 4, -5, 6, 8, 7, 3, -5, -6, 0, 0}; {-1, 4, -4, 3, -1, 5, 4, -7, 7, 4, 0, 0}; {-2, 3, -5, 2, -2, 4, 3, -7, 7, 4, 0, 0}; {-3, 2, -6, 1, -3, 3, 2, 8, 6, 3, 0, 0}; {-2, 3, -5, 2, -2, 4, 4, -6, 7, 3, 0, 0}; {4, -6, 3, -5, 8, -1, 1, 7, 4, 3, 0, 0}; {-3, 5, 0, -6, -6, 2, 5, -4, 0, -1, 0, 0}; {-3, 2, -6, 1, -2, 3, 4, -5, 6, 3, 0, 0}; {-4, 1, -7, 0, -3, 2, 4, -7, 5, 2, 0, 0}; {2, 8, 1, -7, 7, -2, -2, 4, 4, 2, 0, 0}; {0, 6, -1, 7, 5, -4, -2, 5, 3, 1, 0, 0}; {4, 8, -1, 5, 2, 8, 4, -6, 8, 4, 0, 0}; {-4, 1, -7, 0, -2, 4, 2, 7, 6, 4, 0, 0}; {-4, 1, -7, 0, -2, 4, 2, 7, 7, 3, 0, 0}; {1, 7, 0, 8, 7, -2, -3, 3, 4, 1, 0, 0}; {1, 7, 0, 8, 7, -2, -3, 3, 4, 2, 0, 0}; {1, 7, 0, 8, 7, -2, -2, 4, 4, 1, 0, 0}; {-1, 5, -2, 6, 5, -4, -4, 3, 3, 2, 0, 0}; {-6, -1, 7, -2, -4, 2, 1, 8, 5, 3, 0, 0}; {-2, 4, -3, 5, 5, -4, -4, 3, 3, 1, 0, 0}; {5, -7, 0, 6, 4, 8, 7, -4, 8, 4, 0, 0}; {4, 8, -1, 5, 3, 7, 6, -4, 8, 4, 0, 0}; {6, -5, 3, -5, -6, 0, 1, 7, 4, 1, 0, 0}; {6, -4, 5, -2, 3, 8, -7, 2, 0, -3, 0, 0}; {7, -2, 8, 2, 8, 7, 8, -5, 7, 7, 0, 0}; {1, 6, -2, 6, -5, -6, 0, -1, 6, 4, 0, 0}; {-1, 4, -4, 4, -7, 8, 0, -2, 5, 3, 0, 0}; {3, -6, 4, -2, 5, 6, 7, -7, 7, 6, 0, 0}; {-4, 2, -5, 4, -6, -6, -5, -4, 8, 7, 0, 0}; {4, -6, 3, -4, 2, 3, -5, -5, 2, 2, 0, 0}; {1, 7, 0, -7, -1, -3, -4, -2, -7, -7, 0, 0}; {0, 6, -1, 8, -2, -4, -4, -2, -7, 8, 0, 0}; {0, 6, -1, 8, -2, -4, -4, -2, -7, -7, 0, 0}; {4, -5, 5, -1, 6, 6, 8, -6, 7, 6, 0, 0}; {0, 5, -3, 5, -5, -7, -1, -2, 5, 4, 0, 0}; {0, 5, -3, 5, -5, -7, 0, -1, 5, 4, 0, 0}; {-2, 4, -3, 6, -3, -4, -5, -3, -7, 8, 0, 0}; {-3, 3, -4, 5, -4, -5, -5, -4, -7, 8, 0, 0}; {-2, 3, -5, 3, -7, 8, -1, -2, 5, 3, 0, 0}; {6, -3, 7, 1, -7, -6, 5, 6, -3, 0, 0, 0}; {4, -5, 5, -1, 7, -7, 4, 5, -3, -1, 0, 0}; {-1, 5, -2, 7, -2, -5, -5, -2, -7, -7, 0, 0}; {0, 6, -1, 8, -1, -3, -4, -2, -7, -7, 0, 0}; {-1, 5, -2, 7, -2, -4, -5, -3, -7, -7, 0, 0}; {-3, 3, -4, 5, -4, -6, -5, -3, 8, 8, 0, 0}; {0, 5, -3, 5, -4, -6, -1, -2, 6, 5, 0, 0}; {0, 5, -3, 5, -4, -5, -1, -2, 6, 4, 0, 0}; {-2, 3, -5, 3, -6, -7, -2, -3, 6, 4, 0, 0}; {4, -6, 3, -4, 4, 4, -6, -6, 3, 2, 0, 0}; {-1, 4, -4, 4, -5, -6, -1, -2, 6, 4, 0, 0}; {4, -6, 3, -4, 4, 4, -6, -6, 3, 3, 0, 0}; {-2, 3, -5, 3, -6, -7, -1, -2, 5, 3, 0, 0}; {7, -3, 6, -1, 7, 7, -7, -6, 7, 7, 0, 0}; {4, -6, 3, -4, 4, 5, -6, -6, 3, 2, 0, 0}; {-4, 1, -7, 1, 8, 8, -2, -3, 5, 2, 0, 0}; {-5, 0, 8, 0, 7, 7, -2, -3, 4, 2, 0, 0}; {-3, 3, -4, 5, -3, -2, 8, 7, 0, -1, 0, 0}; {8, -3, 5, -3, 4, 0, -2, 0, -5, -6, 0, 0}; {-6, -1, 7, -1, 7, 4, -3, -4, 2, 2, 0, 0}; {0, 5, -3, 5, -3, -5, -1, -1, 5, 4, 0, 0}; {2, 7, -1, 7, -1, -3, -3, -2, -6, -7, 0, 0}; {2, 7, -1, 7, -1, -3, -2, -2, -6, -7, 0, 0}; {1, 6, -2, 6, -2, -4, -2, -2, -6, -7, 0, 0}; {4, -6, 3, -4, 5, 5, -6, -6, 3, 3, 0, 0}; {-3, 2, -6, 2, -6, -7, -2, -3, 5, 3, 0, 0}; {2, 8, 1, -6, 3, 3, -7, -7,

2, 2, 0, 0}; {1, 7, 0, -7, 2, 2, -7, -6, 1, 1, 0, 0}; {2, 8, 1, -6, 3, 4, -7, -7, 2, 1, 0, 0}; {7, -5, 2, -7, 0, 0, -1, 7, 3, -2, 0, 0}; {-4, 1, -7, 1, -6, -7, -3, -3, 5, 3, 0, 0}; {-1, 5, -2, 7, 1, 2, 8, -7, 1, 1, 0, 0}; {-7, -2, 6, -2, 7, 7, -4, -4, 4, 2, 0, 0}; {-3, 3, -4, 5, 4, -5, -3, 3, 2, 3, 0, 0}; {-1, 4, -4, 5, 8, -2, -3, 5, 2, -1, 0, 0}; {-3, 2, -6, 3, 7, -7, 0, -1, 6, 2, 0, 0}; {2, 8, 1, -5, 0, 7, 8, 0, -2, -4, 0, 0}; {-5, 1, -6, 4, -6, -7, -6, -4, 8, 7, 0, 0}; {-5, 1, -6, 4, -6, -6, -6, -4, 8, 7, 0, 0}; {-7, -2, 6, -1, 4, 5, -2, -4, 4, 1, 0, 0}; {-3, 3, -4, 6, -4, -6, -5, -3, 8, 8, 0, 0}; {-5, 1, -6, 4, -5, -7, -7, -4, 8, 8, 0, 0}; {-5, 1, -6, 4, -5, -7, -6, -4, 8, 7, 0, 0}; {-5, 1, -6, 4, -5, -6, -6, -4, 8, 8, 0, 0}; {-5, 0, 8, 1, 7, 6, -2, -3, 4, 3, 0, 0}; {-5, 0, 8, 1, 7, 7, -2, -3, 5, 2, 0, 0}; {6, -5, 3, -4, 3, 0, -3, -2, -5, -6, 0, 0}; {7, -4, 4, -3, 4, 2, -4, -5, 2, 1, 0, 0}; {-1, 3, -6, 2, 8, 5, 2, 2, -3, -5, 0, 0}; {4, -7, 1, -6, 1, -1, -3, -1, -6, -7, 0, 0}; {7, -3, 6, 0, 8, 7, 8, -6, 7, 7, 0, 0}; {-3, 2, -6, 3, -6, -7, -3, -3, 5, 4, 0, 0}; {0, 5, -3, 6, -2, -4, -4, -3, -7, -7, 0, 0}; {-5, 0, 8, 1, -7, 8, -3, -4, 5, 3, 0, 0}; {-1, 5, -2, 8, 2, 2, 8, -7, 1, 1, 0, 0}; {8, -3, 5, -2, 7, 7, -4, -4, 3, 2, 0, 0}; {6, -6, 1, -7, 4, -7, 8, -5, 8, 6, 0, 0}; {2, 6, -3, 5, 1, 6, 6, -7, 7, 5, 0, 0}; {8, -3, 5, -1, -4, 3, 0, 4, 6, 2, 0, 0}; {-5, -2, 4, -4, 8, -3, -7, -5, -6, 6, 0, 0}; {0, 4, -5, 4, 1, 7, 4, 7, 8, 3, 0, 0}; {1, 7, 0, -5, -1, 6, 7, 1, -1, -4, 0, 0}; {3, 8, 0, -6, 0, -2, -3, -1, -6, -7, 0, 0}; {7, -3, 6, 1, 8, 7, 8, -5, 7, 7, 0, 0}; {1, 6, -2, 8, -2, -4, -4, -2, -7, 8, 0, 0}; {-5, -1, 6, -1, 5, 2, 1, 1, -4, -6, 0, 0}; {5, 8, -2, 6, -4, 8, 4, 4, -1, -4, 0, 0}; {1, 5, -4, 5, 0, 6, 6, -7, 7, 6, 0, 0}; {7, 8, -4, 6, -4, -7, 1, 8, -7, 5, 0, 0}; {-5, -7, -6, 1, -4, 2, -6, 2, 3, 8, 0, 0}; {-1, -1, 2, -5, 8, -4, 5, -2, -1, 8, 0, 0}; {4, 5, -7, 3, 2, 7, 0, 8, -5, 6, 0, 0}; {-2, -2, 1, -6, 8, -4, 4, -3, -2, 7, 0, 0}; {3, 4, 8, 2, 1, 6, 0, -7, -4, 6, 0, 0}; {2, 3, 7, 1, 1, 5, -1, 8, -5, 6, 0, 0}; {0, 1, 5, -1, 0, 4, -2, 8, -5, 6, 0, 0}; {1, 4, -6, 7, -1, -2, 7, -1, 4, 1, 0, 0}; {-5, -3, 2, -2, 5, 3, -4, 3, 7, 3, 0, 0}; {-5, -3, 2, -2, 5, 3, -4, 4, 6, 3, 0, 0}; {-3, -5, -4, 4, -1, 3, -5, 3, 3, -6, 0, 0}; {2, 1, 3, -4, -7, -2, 6, -1, 0, -7, 0, 0}; {5, -7, 0, -1, 7, 8, 1, -6, 1, 0, 0, 0}; {-7, 1, -4, 0, 0, 7, 0, 3, 7, 5, 0, 0}; {8, 1, -2, 3, 8, -2, -3, 8, -1, 1, 0, 0}; {3, -7, 3, 6, 4, -3, 5, 6, -7, 7, 0, 0}; {-1, 7, 3, 8, -4, 1, 0, -6, 1, 2, 0, 0}; {5, 6, -5, -6, 2, -4, 4, -5, 3, 4, 0, 0}; {1, 2, 7, 6, -1, -6, 2, -7, 2, 4, 0, 0}; {6, -3, 8, -3, -4, 6, -2, 1, 6, 5, 0, 0}; {2, -7, 4, -7, -7, 5, -3, 0, 5, 5, 0, 0}; {0, -7, 6, -3, 3, -6, 7, -7, -1, 2, 0, 0}; {5, 6, -5, -5, 2, -4, 4, -5, 3, 4, 0, 0}; {0, -7, 6, -2, -3, 2, 8, 1, 4, 0, 0, 0}; {3, 4, -7, -7, 1, -6, 3, -6, 3, 4, 0, 0}; {3, 4, -7, -7, 1, -5, 3, -6, 3, 3, 0, 0}; {3, 4, -7, -7, 1, -5, 3, -6, 3, 4, 0, 0}; {-7, -5, 1, 2, -5, 7, 0, 7, 0, 2, 0, 0}; {8, -6, 0, 1, -6, 6, -1, 6, -1, 2, 0, 0}; {2, 3, 8, 8, 1, -6, 3, -6, 3, 4, 0, 0}; {1, 2, 7, 7, 0, -6, 3, -7, 2, 4, 0, 0}; {-5, -5, -1, -2, 6, 0, 8, -3, 5, 5, 0, 0}; {-3, 3, -3, 2, 0, -6, 2, 4, 7, 6, 0, 0}; {-3, 3, -3, 3, 5, 7, 2, 3, 8, 5, 0, 0}; {2, -7, 4, -5, -2, 2, -2, -1, 5, 4, 0, 0}; {6, -2, -6, 2, 7, -3, -7, 8, 0, 1, 0, 0}; {-1, 6, 1, 8, -2, 2, -6, -6, 2, 0, 0, 0}; {1, -6, 7, 0, -7, -3, 0, 3, 4, 3, 0, 0}; {3, -6, 5, -4, 4, 6, 8, -7, 7, 6, 0, 0}; {0, 8, 4, -4, 5, -5, 0, 5, 5, 4, 0, 0}; {8, -1, -6, 1, -6, 8, -7, -4, 8, 8, 0, 0}; {-1, 8, 5, -2, -5, 1, 8, -1, 3, 1, 0, 0}; {-6, -1, 8, -3, 6, 2, 0, 2, -4, -5, 0, 0}; {-1, 8, 5, -2, -4, 1, 7, 1, 4, 0, 0, 0}; {-2, 7, 4, -3, -5, 1, 7, -1, 3, 0, 0, 0}; {-4, 5, 2, -5, -6, 0, 6, -1, 3, 0, 0, 0}; {3, 4, -7, -6, 2, -4, 4, -5, 3, 3, 0, 0}; {-5, 2, -3, 4, 2, 8, -5, 2, 3, 2, 0, 0}; {3, 2, 5, 4, -5, 4, -5, 0, 7, 6, 0, 0}; {-2, -1, 4, 5, -2, -7, 2, -7, 2, 3, 0, 0}; {7, 7, -5, -5, 3, -3, 5, -4, 4, 5, 0, 0}; {4, -6, 4, -6, 8, -2, -1, 6, 5, 2, 0, 0}; {-3, 5, 1, -7, -4, 3, 6, 0, -1, -2, 0, 0}; {6, -3, 8, -1, 1, 8, -6, 3, 1, -1, 0, 0}; {3, -5, 7, 0, 5, -5, 6, 7, -1, 0, 0, 0}; {3, -5, 7, 0, 5, -5, 7, 8, 0, 1, 0, 0}; {2, -6, 6, -1, 4, -6, 7, 6, -1, 0, 0, 0}; {7, 0, -3, 7, -3, 4, 2, 3, -4, 0, 0, 0}; {8, 1, -2, 8, -2, 5, 3, 5, -3, 1, 0, 0}; {8, -1, -6, 2, 6, -5, -5, 6, 1, 0, 0, 0}; {1, -7, 5, -2, 3, -6, 6, 6, -1, 1, 0, 0}; {7, 0, -3, 7, -3, 5, 2, 4, -4, 0, 0, 0}; {1, -7, 5, -2, 3, -6, 7, 6, -1, 0, 0, 0}; {-6, 0, -6, 1, 4, -5, -5, 4, 2, -1, 0, 0}; {4, -5, 6, -2, 3, -7, -7, 3, 0, -1, 0, 0}; {-7, -1, -7, 0, 4, -6, -6, 4, 2, -2, 0, 0}; {3, 8, 1, 7, -6, 5, 2, -7, 6, -1, 0, 0}; {-7, 2, -1, -7, 1, 8, -2, 2, 3, 3, 0, 0}; {-4, 4, 0, -7, 0, 3, 5, 7, 6, 4, 0, 0}; {1, -6, 7, 1, -7, -3, 0, 3, 3, 3, 0, 0}; {8, 0, -4, 5, -3, 0, 3, 5, 4, 4, 0, 0}; {6, -4, 6, -3, 3, 5, -4, -4, 3, 1, 0, 0}; {-3, 6, 3, -3, 6, -5, -2, 1, 3, 2, 0, 0}; {7, -1, -5, 4, -4, 0, 3, 6, 6, 4, 0, 0}; {6, -2, -6, 3, -5, 0, 3, 6, 6, 3, 0, 0}; {2, -6, 6, -1, 7, -4, 1, 6, 5, 4, 0, 0}; {0, 8, 4, -3, 5, -5, 0, 5, 4, 3, 0, 0}; {-5, 2, -3, 5, -4, 1, 5, -7, 7, 5, 0, 0}; {8, -4, 4, -7, -3, 8, 5, -6, 8, 0, 0, 0}; {2, -7, 4, -4, 4, 5, 7, -7, 7, 6, 0, 0}; {6, -2, -6, 3, -4, -1, 2, 5, 5, 4, 0, 0}; {0, 7, 2, -6, 2, 4, 7, 8, 6, 5, 0, 0}; {0, 7, 2, -6, 2, 4, 7, 8, 7, 5, 0, 0}; {5, -3, -7, 2, -5, -1, 2, 4, 5, 3, 0, 0}; {-6, 1, -4, 4, -4, 1, 4, -7, 7, 5, 0, 0}; {7, -3, 7, -2, 6, 7, -4, -5, 4, 2, 0, 0}; f-1, 4, -3, 3, -6, -6, -1, -2, 6, 3, 0, 0}; {-2, 3, -4, 2, -7, -7, -1, -2, 5, 2, 0, 0}; {-5, 3, -1, 8, 2, 8, -3, 4, 5, 3, 0, 0}; {0, 6, 0, 7, -1, -4, -5, -2, -7, -7, 0, 0}; {-2, 4, -2, 5, -2, -5, -5, -2, -7, -7, 0, 0}; {-5, 2, -3, 5, 2, -7, -4, 3, 3, 2, 0, 0}; {5, -5, 5, -4, -7, -1, 0, 7, 5, 3, 0, 0}; {-4, 1, -6, 0, -3, 2, 3, -7, 7, 3, 0, 0}; {-4, 1, -6, 0, -3, 2, 3, -6, 7, 3, 0, 0}; {0, 6, 0, 7, 5, -4, -4, 3, 4, 2, 0, 0}; {-6, -1, 8, -2, -4, 1, 3, -7, 6, 3, 0, 0}; {-1, 5, -1, 6, 5, -4, -4, 3, 4, 2, 0, 0}; {-7, -2, 7, -3, -5, 1, 0, 7, 6, 3, 0, 0}; {4, 8, 0, 5, 2, 7, 6, -4, 8, 4, 0, 0}; {8, -3, 6, -4, -5, 1, 2, -7, 5, 1, 0, 0}; {1, 8, 3, -5, -4, 2, -3, 0, 4, 4, 0, 0}; {6, -5, 4, -5, -6, 0, 0, 7, 5, 1, 0, 0}; {8, -2, 8, 0, 0, 5, 0, 2, 6, 5, 0, 0}; {-6, 0, -6, 2, 3, -6, -4, 4, 2, -1, 0, 0}; {2, -6, 6, 0, 4, -6, 6, 8, 0, 1, 0, 0}; {0, 8, 4, -2, 2, -7, 5, 6, -1, 0, 0, 0}; {-5, 2, -3, 6, -6, -1, -6, -6, 2, 2, 0, 0}; {-6, 1, -4, 5, -7, -2, -6, -7, 2, 1, 0, 0}; {-6, 1, -4, 5, -7, -2, -6, -7, 1, 2, 0, 0}; {-1, 7, 3, -3, 2, 8, 5, 5, -2, 0, 0, 0}; {-2, 6, 2, -4, 1, 8, 5, 5, -2, 0, 0, 0}; {7, -3, 7, -1, 2, -7, -6, 3, 1, -2, 0, 0}; {6, -4, 6, -2, 2, 5, -2, -3, 5, 2, 0, 0}; {-2, 6, 2, -4, 2, 8, 4, 5, -2, 0, 0, 0}; {0, 5, -2, 5, -7, -2, -3, 6, 3, -1, 0, 0}; {3, -6, 5, -2, 5, 6, 7, -7, 7, 6, 0, 0}; {4, -4, 8, 2, -6, -2, 2, 5, 5, 3, 0, 0}; {1, -7, 5, -1, 7, -4, 1, 5, 5, 3, 0, 0}; {1, -7, 5, -1, 7, -4, 1, 5, 5, 4, 0, 0}; {0, 8, 4, -2, 6, -5, 0, 5, 4, 3, 0, 0}; {7, -5, 3, -7, -3, 8, 4, -6, 7, 0, 0, 0}; {0, 5, -2, 5, -5, -6, -1, -2, 6, 4, 0, 0}; {4, -6, 4, -4, 3, 4, -6, -6, 3, 2, 0, 0}; {-3, 2, -5, 2, 8, 8, -2, -3, 5, 3, 0, 0}; {-2, 3, -4, 3, -7, -7, -1, -2, 5, 3, 0, 0}; {-3, 2, -5, 2, 8, 8, -1, -2, 5, 2, 0, 0}; {-3, 2, -5, 2, 8, 8, -1, -2, 5, 3, 0, 0}; {0, 6, 0, 8, -1, 0, -7, -7, 1, 0, 0, 0}; {-3, 2, -5, 2, 8, -7, -1, -2, 5, 2, 0, 0}; {-4, 1, -6, 1, 7, 8, -2, -3, 5, 2, 0, 0}; {-4, 1, -6, 1, 7, 8, -1, -2, 5, 2, 0, 0}; {1, 7, 1, -7, 0, 2, -6, -6, 2, 1, 0, 0}; {4, -4, 8, 2, -5, -1, 0, 3, 5, 3, 0, 0}; {7, -2, -7, 2, -6, -1, 3, 8, 6, 5, 0, 0}; {7, -2, -7, 2, -6, -1, 3, 8, 7, 5, 0, 0}; {-5, 3, -1, -7, 2, 8, -2, 4, 5, 4, 0, 0}; {7, -4, 5, -4, 3, 0, -1, 0, -5, -6, 0, 0}; {-3, 2, -5, 2, -7, 7, -2, -3, 4, 3, 0, 0}; {-4, 1, -6, 1, 8, 7, -2, -3, 4, 3, 0, 0}; {6, -4, 6, -2, 6, 6, -7, -6, 7, 6, 0, 0}; {4, -6, 4, -4, 4, 5, -7, -7, 7, 6, 0, 0}; {3, -7, 3, -5, 3, 4, -6, -6, 3, 2, 0, 0}; {-7, 0, -5, 4, -3, 0, 4, 5, 5, 5, 0, 0}; {1, 7, 1, -7, 1, 3, -7, -7, 2, 1, 0, 0}; {0, 6, 0, 8, 0, 2, -7, -7, 2, 1, 0, 0}; {7, -4, 5, -4, 4, 0, -1, 0, -5, -6, 0, 0}; {6, -5, 4, -5, 3, -1, -1, 0, -5, -6, 0, 0}; {-7, -2, 7, -2, 6, 3, -4, -5, 2, 2, 0, 0}; {-7, -1, -7, 1, -6, 8, -6, -4, 7, 7, 0, 0}; {3, 8, 1, 8, 0, -3, -2, -1, -6, -6, 0, 0}; {5, -5, 5, -3, 6, 6, -7, -6, 7, 6, 0, 0}; {4, -6, 4, -4, 5, 6, -7, -7, 7, 6, 0, 0}; {3, -7, 3, -5, 4, 5, 8, -7, 7, 6, 0, 0}; {-3, 5, 1, -5, 6, -6, -2, 1, 3, 2, 0, 0}; {-5, 0, -7, 0, -4, 2, 3, -7, 6, 3, 0, 0}; {-6, -1, 8, -1, -4, 2, 1, 7, 6, 3, 0, 0}; {-1, 5, -1, 7, 5, -4, -3, 3, 4, 1, 0, 0}; {-6, -1, 8, -1, -4, 2, 2, 8, 6, 3, 0, 0}; {-1, 5, -1, 7, 5, -4, -3, 4, 4, 1, 0, 0}; {-7, -2, 7, -2, -5, 1, 2, 8, 6, 2, 0, 0}; {-7, -2, 7, -2, -5, 1, 2, 8, 6, 3, 0, 0}; {-2, 4, -2, 6, 5, -4, -3, 4, 3, 1, 0, 0}; {2, -7, 4, -3, -3, 5, 7, -1, 1, -1, 0, 0}; {2, 6, -2, 4, 1, 6, 5, -5, 8, 4, 0, 0}; {7, -4, 5, -4, -6, 0, 1, 8, 5, 1, 0, 0}; {0, 4, -4, 3, 0, 5, 6, -5, 7, 3, 0, 0}; {6, -6, 2, -7, -3, -3, 3, 1, 8, 4, 0, 0}; {-4, 2, -4, 5, -5, -7, -6, -3, 8, 8, 0, 0}; {-4, 1, -6, 2, 8, 8, -2, -3, 5, 3, 0, 0}; {-6, -1, 8, 0, 6, 7, -2, -3, 5, 2, 0, 0}; {3, 7, -1, 6, -4, -7, 1, -1, 5, 3, 0, 0}; {7, -3, 7, 0, 8, 7, -7, -5, 7, 7, 0, 0}; {3, 7, -1, 6, -4, -6, 1, -1, 6, 3, 0, 0}; {-5, 0, -7, 1, 8, 8, -3, -4, 5, 3, 0, 0}; {-7, -2, 7, -1, 6, 6, -3, -4, 4, 2, 0, 0}; {8, -3, 6, -2, 5, 6, -4, -4, 4, 2, 0, 0}; {2, 7, 0, 8, 0, -3, -3, -2, -6, -7, 0, 0}; {2, 7, 0, 8, 0, -3, -3, -1, -6, -7, 0, 0}; {6, -4, 6, -1, 8, 7, -7, -5, 7, 7, 0, 0}; {5, -5, 5, -2, 7, 6, 8, -6, 7, 6, 0, 0}; {3, -7, 3, -4, 5, 5, 7, -7, 7, 6, 0, 0}; {-3, 2, -5, 3, -5, -6, -4, -3, -7, 8, 0, 0}; {2, 6, -2, 5, -4, -5, 0, -2, 7, 3, 0, 0}; {-4, 0, 8, -1, 7, 3, 1, 1, -4, -5, 0, 0}; {-3, 2, -5, 3, -4, -6, -4, -3, 8, 7, 0, 0}; {-3, 2, -5, 3, -4, -6, -4, -3, -7, 8, 0, 0}; {-6, -2, 6, -3, 5, 2, 0, 1, -4, -6, 0, 0}; {3, 7, -1, 6, -2, -3, 1, 0, 7, 4, 0, 0}; {3, 7, -1, 7, 6, -1, 7, 6, 6, -1, 0, 0}; {-2, 1, 8, -1, -3, 5, -3, -7, -7, 1, 0, 0}; {2, 6, -2, 6, 5, -2, 7, 6, 6, -1, 0, 0}; {8, -2, 8, 2, -7, 7, -7, -4, 7, 7, 0, 0}; {3, 8, 1, -6, 0, -2, -3, -1, -6, -7, 0, 0}; {7, -3, 7, 1, 8, 7, 8, -5, 7, 7, 0, 0}; {0, 4, -4, 4, -7, -6, 1, -1, 7, 2, 0, 0}; {7, -4, 5, -2, 5, 3, -4, -4, 2, 3, 0, 0}; {2, 8, 2, -4, 4, 4, 7, -7, 6, 6, 0, 0}; {4, 8, 0, 8, -2, -4, 1, -1, 7, 5, 0, 0}; {8, -3, 6, -1, 6, 5, -4, -4, 4, 3, 0, 0}; {0, 4, -4, 4, -6, 8, 0, -2, 5, 3, 0, 0}; {-1, 4, -3, 6, -2, -4, -5, -3, -7, -7, 0, 0}; {7, -5, 3, -5, 2, 0, -1, 0, -5, -6, 0, 0}; {1, 5, -3, 5, -4, -6, 0, -1, 5, 4, 0, 0}; {6, -5, 4, -3, 5, 4, -5, -5, 3, 2, 0, 0}; {1, 5, -3, 5, -4, -5, 0, -1, 6, 3, 0, 0}; {1, 5, -3, 5, -4, -4, 0, -2, 7, 3, 0, 0}; {-7, -2, 7, 0, -7, 8, -6, -5, 7, 8, 0, 0}; {3, 7, -1, 7, -1, -3, -1, -2, -6, -7, 0, 0}; {1, 5, -3, 5, -3, -5, 0, -1, 5, 4, 0, 0}; {6, -5, 4, -3, 6, 5, -5, -4, 3, 2, 0, 0}; {6, -5, 4, -3, 6, 6, -5, -5, 3, 2, 0, 0}; f-1, 3, -5, 4, 8, -7, 1, -1, 7, 2, 0, 0}; f 0, 4, -4, 5, -5, 8, 0, -1, 5, 4, 0, 0}; {7, -6, 1, -6, 3, -7, -7, -4, -7, 7, 0, 0}; {5, 8, -1, 8, -2, -7, 2, 0, 5, 4, 0, 0}; {2, 3, 8, 2, -7, 6, -1, 6, 8, 3, 0, 0}; {-6, -6, -2, 7, 5, -6, 2, -4, -2, 6, 0, 0}; {8, 8, -4, 5, 4, 8, 1, -5, -3, 6, 0, 0}; {2, 3, 8, 3, -7, 7, -1, 6, 8, 4, 0, 0}; {2, 1, 4, -3, -6, -2, 6, -2, -1, 8, 0, 0}; {-7, 7, -7, 2, -2, 1, -7, 1, 1, -7, 0, 0}; {-5, -6, -2, 8, 6, -6, 3, -5, -3, 7, 0, 0}; {-2, -5, -3, 6, 1, 3, -5, 3, 2, -6, 0, 0}; {0,-7, 7, -3, 2, -7, -6, 5, -2, 0, 0, 0}; {-5, 7, 8, 2, 8, 4, -2, 6, -7, -4, 0, 0}; {-2, 7, 5, -4, 0, 7, -7, 4, -2, 0, 0, 0}; {-5, 7, 8, 2, -7, 5, -2, 7, -7, -3, 0, 0}; {7, 0, -2, 5, -6, 5, -4, 0, 2, 1, 0, 0}; {3, -3, -4, 5, -1, 6, -6, -3, 1, 1, 0, 0}; {3, -3, -4, 5, 0, 7, -6, -2, 2, 0, 0, 0}; {-4, 4, 1, 8, 4, 8, -3, 5, 7, 2, 0, 0}; {-5, 4, 2, -6, -7, -1, 5, -3, 2, -1, 0, 0}; {0, -6, -7, 2, 2, -7, 0, -7, -1, -2, 0, 0}; {-7, -7, -2, -3, 5, -2, 6, -4, 4, 4, 0, 0}; {-2, -1, 5, 5, -2, 8, 1, 8, 1, 3, 0, 0}; {7, 7, -4, -5, 3, -4, 5, -5, 4, 5, 0, 0}; {7, 0, -2, 6, -7, 4, -5, 1, 0, -1, 0, 0}; {2, -6, 7, -2, 0, -6, 1, 5, 3, 0, 0, 0}; {3, -2, -2, 8, -3, -7, 2, -7, -4, -3, 0, 0}; {8, 4, 5, 0, 7, 4, -3, 5, 8, -4, 0, 0}; {1, -4, -4, 6, -4, 8, 1, 8, -5, -3, 0, 0}; {-6, 4, 3, -4, 1, -3, 5, -5, -2, -2, 0, 0}; {6, 2, 3, -1, 6, 2, -4, 5, 8, -4, 0, 0}; {-7, 0, -4, 3, 7, -4, -4, 7, 1, 1, 0, 0}; {0, 7, 3, -6, 2, 5, 7, 8, 7, 5, 0, 0}; {5, -3, -6, 2, -5, 0, 2, 4, 5, 3, 0, 0}; {4,-4,-7, 1, -6, -1, 2, 3, 4, 4, 0, 0}; {1, -6, 8, 1, -4, 2, -7, 0, 3, 2, 0, 0}; {-4, 4, 1, -7, 3, 8, -2, 4, 6, 3, 0, 0}; {1, 7, 2, 8, 0, 4, 6, -5, 8, 5, 0, 0}; {7,-2,-6, 1, -6, -1, 2, 7, 6, 4, 0, 0}; {-6, 2, -1, 7, 1, 7, -3, 3, 5, 3, 0, 0}; {8, 0, -3, 5, 0, 6, -5, 2, 4, 2, 0, 0}; {8, 0, -3, 5, 1, 6, -4, 4, 5, 2, 0, 0}; {6, -2, -5, 3, 0, 5, -6, 2, 5, 1, 0, 0}; {-6, 3, 1, -6, 8, -2, 6, -3, 2, 0, 0, 0}; {-6, 3, 1, -6, 8, -2, 6, -2, 2, 0, 0, 0}; {4, -4, -7, 1, -2, 4, -7, 1, 4, 1, 0, 0}; {8, 1, -1, 8, 7, -3, 4, -4, 1, -1, 0, 0}; {-7, 2, 0, -7, 8, -2, 5, -2, 2, 0, 0, 0}; {6, 2, 3, -1, 5, 2, -5, 4, 8, -5, 0, 0}; {6, -4, 7, -2, 0, 4, -1, 0, 6, 4, 0, 0}; {-5, 2, -2, 6, -6, -1, -5, -7, 1, 2, 0, 0}; {-6, 1, -3, 5, -7, -2, -5, -7, 1, 3, 0, 0}; {-2, 6, 3, -4, 1, 8, 5, 5, -2, 1, 0, 0}; {-1, 7, 4, -3, 2, -7, 6, 6, -2, 1, 0, 0}; {0, 6, 1, 8, -4, 1, -2, -6, 3, 2, 0, 0}; {-5, 1, -4, 3, 8, -3, -4, 7, 2, 0, 0, 0}; {3, -7, 4, -5, 0, 7, 8, 3, 1, -3, 0, 0}; {1, 7, 2, -7, -1, 2, -6, -6, 2, 0, 0, 0}; {-3, 5, 2, -5, 3, -6, 0, 4, 4, 4, 0, 0}; {-1, 6, 2, -6, 2, 4, 6, 8, 7, 5, 0, 0}; {-3, 4, 0, 8, 0, 3, 6, 7, 7, 4, 0, 0}; {0, 8, 5, -2, 7, -4, 0, 3, 4, 3, 0, 0}; {-4, 1, -5, 1, 7, -7, -2, -3, 6, 2, 0, 0}; {-3, 5, 2, -5, 4, -6, -1, 4, 4, 3, 0, 0}; {1, -6, 8, 2, -4, 3, -6, 0, 2, 2, 0, 0}; {-5, 0, -6, 0, 6, -7, -3, -3, 5, 2, 0, 0}; {0, 6, 1, 8, -1, 4, 6, -6, 7, 5, 0, 0}; {5,-7,2, 7, -3, -3, 2, 0, 8, 3, 0, 0}; {6, -3, -7, 1, -6, -2, 2, 8, 7, 5, 0, 0}; {5, -4, 8, 0, -7, -3, 2, 8, 7, 5, 0, 0}; {5, -4, 8, 0, -7, -2, 2, 7, 5, 4, 0, 0}; {-1, 5, 0, 7, -1, 3, 6, -6, 7, 5, 0, 0}; {5, -4, 8, 0, -7, -2, 2, 7, 6, 4, 0, 0}; {4, -5, 7, -1, 8, -3, 1, 6, 5, 4, 0, 0}; {-7, 1, -2, 7, 1, 7, -3, 3, 4, 3, 0, 0}; {8, 0, -3, 6, 0, 6, -4, 3, 4, 3, 0, 0}; {8, 0, -3, 6, 0, 6, -4, 3, 5, 3, 0, 0}; {3, -6, 6, -2, 7, -3, 1, 6, 5, 4, 0, 0}; {-5, 1, -4, 3, -4, -7, -6, -3, 8, 8, 0, 0}; {3, -6, 6, -2, 8, -4, 0, 7, 8, 4, 0, 0}; {-7, -1, -6, 1, -5, 8, -7, -4, 8, 8, 0, 0}; {-7, -1, -6, 1, -5, 8, -6, -3, 8, 8, 0, 0}; {4, -4, -7, 2, -2, 3, -6, 0, 4, 2, 0, 0}; {1, -7, 6, -1, -4, 2, 8, -1, 3, 1, 0, 0}; {0, 8, 5, -2, -5, 1, 7, -2, 2, 1, 0, 0}; {2, -6, 7, 0, -3, 3, -7, 2, 4, 2, 0, 0}; {-7, -2, 8, -2, -5, 1, 1, 8, 6, 3, 0, 0}; {-1, 3, -4, 2, -1, 4, 5, -5, 7, 3, 0, 0}; {-4, 0, -7, -1, -3, 2, 4, -6, 7, 3, 0, 0}; {-4, 7, 7, 4, -4, 3, 8, 8, -1, -4, 0, 0}; {7,-2,-6,3, 7, -4, -7, 8, 0, 2, 0, 0}; {-3, 5, 2, -4, 1, 8, 4, 5, -2, -1, 0, 0}; {7, -2, -6, 3, 7, -3, 8, -7, 1, 1, 0, 0}; {5, -4, 8, 1, 6, -4, 8, 7, 0, 1, 0, 0}; {-6, 2, -1, -7, -1, 6, 3, 3, -3, -1, 0, 0}; {5, -4, 8, 1, 6, -4, 8, 8, 0, 2, 0, 0}; {-6, 2, -1, -7, -1, 6, 3, 4, -3, 0, 0, 0}; {4, -5, 7, 0, 5, -5, 8, 6, 0, 0, 0, 0}; {-1, 2, -6, -1, 2, -4, 7, -3, -7, 1, 0, 0}; {4, 8, 1, 7, -4, -6, 2, 0, 6, 3, 0, 0}; {-2, 5, 1, -6, 2, 3, 5, 8, 6, 5, 0, 0}; {-3, 4, 0, -7, 1, 2, 5, 8, 6, 5, 0, 0}; {-4, 3, -1, 8, 0, 1, 5, 7, 5, 4, 0, 0}; {5, -7, 2, 8, -3, -4, 2, 0, 7, 4, 0, 0}; {-3, 4, 0, -7, 1, 3, 5, 7, 6, 5, 0, 0}; {5, -7, 2, 8, -3, -3, 2, 0, 8, 4, 0, 0}; {8, -3, 7, -2, 4, 6, -3, -4, 4, 1, 0, 0}; {-5, 3, 0, -6, 3, -7, -2, 3, 4, 3, 0, 0}; {-7, 0, -4, 5, -2, 0, 4, 6, 5, 4, 0, 0}; {3, -7, 4, -4, 4, 5, 8, -7, 7, 6, 0, 0}; {3, 7, 0, 6, -4, -5, 1, -1, 7, 3, 0, 0}; {7, -2, -6, 3, -4, -1, 3, 5, 5, 4, 0, 0}; {-6, -1, -7, 0, 7, 8, -3, -4, 5, 2, 0, 0}; {3, 7, 0, 6, -4, -4, 1, -1, 7, 3, 0, 0}; {2, 6, -1, 5, -5, -5, 1, -1, 7, 3, 0, 0}; {7, -4, 6, -3, 4, 6, -4, -5, 4, 1, 0, 0}; {0, 7, 3, -4, 5, -5, 0, 5, 5, 4, 0, 0}; {3, -7, 4, -4, 5, 5, 8, -6, 7, 6, 0, 0}; {0, 6, 1, -7, 2, 3, 7, 8, 6, 6, 0, 0}; {-5, 0, -6, 1, -7, -7, -4, -4, -7, 7, 0, 0};

{-1, 5, 0, 8, 1, 3, 6, 8, 6, 5, 0, 0}; {-2, 4, -1, 7, 0, 2, 6, 7, 6, 5, 0, 0}; {-4, 0, -7, -1, 7, 3, 1, 2, -4, -5, 0, 0}; {-1, 4, -2, 5, -2, -5, -4, -2, -7, -7, 0, 0}; {0, 4, -3, 4, -7, -6, 1, -1, 7, 2, 0, 0}; {6, -5, 5, -3, 3, 8, -7, 2, -1, -4, 0, 0}; {1, 5, -2, 5, -5, 8, 0, -1, 4, 4, 0, 0}; {-4, 0, -7, 0, 7, 3, 1, 2, -4, -5, 0, 0}; {0, 5, -1, 7, -1, -4, -4, -2, -7, -7, 0, 0}; {0, 5, -1, 7, -1, -4, -3, -2, -7, 8, 0, 0}; {6, -5, 5, -3, 5, 6, -4, -5, 4, 2, 0, 0}; {-2, 2, -5, 2, -7, -7, -1, -3, 6, 2, 0, 0}; {6, -5, 5, -3, 5, 7, -7, -5, 8, 6, 0, 0}; {-2, 3, -3, 5, -2, -5, -4, -3, -7, 8, 0, 0}; {-6, -1, -7, 1, -6, 8, -6, -4, 8, 8, 0, 0}; {-6, -1, -7, 2, -6, 8, -6, -4, 8, 8, 0, 0}; {-4, 0, -7, 1, 8, -7, -2, -3, 5, 2, 0, 0}; {-6, -2, 7, -1, 6, 7, -3, -3, 5, 2, 0, 0}; {5, -7, 2, -6, 2, -1, -2, -1, -6, -6, 0, 0}; {4, 7, -1, 6, -3, -3, 1, 0, 7, 3, 0, 0}; {-5, 0, -6, 4, -5, -7, -6, -4, 8, 8, 0, 0}; {8, -3, 7, 1, -7, 7, -7, -5, 7, 7, 0, 0}; {0, 1, 7, -1, -2, 5, -3, -7, -5, 3, 0, 0}; {-2, -1, 5, -2, -3, 4, -4, 8, -5, 3, 0, 0}; {0, 3, -5, 6, 8, 2, -3, 2, 0, -5, 0, 0}; {0, -1, 3, -5, 8, -3, 4, -2, -1, 6, 0, 0}; {7, 5, 8, 0, -3, 0, 7, 0, 0, 7, 0, 0}; {1, -2, 0, 7, 4, 5, -5, 2, 1, 8, 0, 0}; {7, 3, 5, -4, 7, 8, -1, 6, 4, -4, 0, 0}; {-4, -7, -4, 4, 0, 3, -6, 1, 0, -6, 0, 0}; {-7, 6, -7, 1, -2, 1, -7, 1, 0, -6, 0, 0}; {1, -4, -3, 6, -3, -7, 1, -7, -6, -2, 0, 0}; {-1, -6, -5, 4, -5, 7, 0, 8, -5, -3, 0, 0}; f 2, -3, -2, 7, -3, -7, 2, -7, -5, -2, 0, 0}; {4, 0, 2, -3, 4, 0, -4, 5, 8, -4, 0, 0}; {0, -5, -4, 6, -4, 7, 1, -7, -6, -2, 0, 0}; {0, 8, 6, -3, 0, -7, 0, 5, 2, 0, 0, 0}; {5, -2, -3, 5, -7, 3, -5, 1, -1, -1, 0, 0}; {-2, -7, -6, 4, -6, 6, 0, 8, -7, -4, 0, 0}; {-2, -7, -6, 4, -6, 6, 0, 8, -6, -4, 0, 0}; {-2, -7, -6, 4, -6, 6, 0, 8, -6, -3, 0, 0}; {-2, -7, -6, 4, -6, 6, 0, 8, -5, -3, 0, 0}; {8, 2, 2, -5, 0, -4, 5, -5, -3, -2, 0, 0}; {7, 1, 1, -6, -1, -5, 4, -6, -3, -3, 0, 0}; {2, -5, -6, 2, 6, 1, -7, -1, -1, -2, 0, 0}; {7, 1, 1, -6, -1, -5, 4, -5, -4, -3, 0, 0}; {8, 2, 2, -5, 1, -4, 4, -5, -4, -2, 0, 0}; {-6, 2, 0, 7, -5, 6, -3, 1, 2, 0, 0, 0}; {2, -6, 8, -1, -3, 2, -7, 1, 4, 0, 0, 0}; {1, -4, -3, 7, -4, 8, 1, -7, -6, -3, 0, 0}; {5, 1, 3, -2, 4, 1, -5, 4, 8, -5, 0, 0}; {2, -6, 8, -1, 1, -6, 1, 6, 2, 0, 0, 0}; {7, 0, -1, 7, -6, 4, -4, 2, -1, -1, 0, 0}; {1, -4, -3, 7, -4, 8, 2, -6, -6, -3, 0, 0}; {0, -5, -4, 6, -5, 7, 1, -7, -6, -3, 0, 0}; {0, -5, -4, 6, -5, 8, 1, -7, -6, -4, 0, 0}; {-3, 8, -7, 4, -7, 6, 0, 8, -7, -4, 0, 0}; {-5, 3, 1, -7, -5, 6, -3, 2, 1, -1, 0, 0}; {0, -4, -2, -6, 0, -1, -6, 3, 7, -6, 0, 0}; {0, -7, 8, 1, 5, -1, -7, -1, 0, -2, 0, 0}; {-6, 5, 6, 1, 7, 4, -2, 6, -7, -4, 0, 0}; {7, -1, -3, 5, 8, 3, -5, 0, 0, -2, 0, 0}; {6, -4, 8, -2, 0, 4, 1, -3, 4, 5, 0, 0}; {-7, 0, -3, 4, 8, -3, -4, -7, 1, 3, 0, 0}; {6, -1, -2, 7, 1, 8, -5, -2, 2, 1, 0, 0}; {4, -5, 8, -1, 7, -3, 1, 7, 4, 2, 0, 0}; {4, -5, 8, -1, 8, -2, 1, 6, 5, 3, 0, 0}; {-2, 4, 0, 6, -2, 3, 5, -6, 7, 5, 0, 0}; {4, -4, -6, 2, -2, 3, -7, 2, 4, 1, 0, 0}; {4, -4, -6, 2, -2, 3, -6, 1, 4, 2, 0, 0}; {-6, 0, -4, 2, -4, 0, 3, -6, 7, 4, 0, 0}; {-7, -1, -5, 1, -5, 0, 2, 8, 6, 3, 0, 0}; {-7, -1, -5, 1, -5, 0, 2, 8, 6, 4, 0, 0}; {1, -7, 7, -1, -5, 2, 7, -1, 1, 1, 0, 0}; {-6, 0, -4, 2, -4, 1, 4, -6, 6, 4, 0, 0}; {2, -6, 8, 0, -3, 2, -7, 0, 4, 1, 0, 0}; {3, -5, -7, 1, -2, 3, -6, 2, 4, 1, 0, 0}; {2, -6, 8, 0, -3, 2, -7, 1, 4, 1, 0, 0}; {2, -6, 8, 0, -3, 2, -7, 2, 4, 1, 0, 0}; {2, -6, 8, 0, -3, 3, 8, 0, 3, 0, 0, 0}; {-7, -1, -5, 1, -4, 0, 3, -6, 6, 4, 0, 0}; {1, -7, 7, -1, -4, 2, 8, 0, 3, 1, 0, 0}; {-4, 3, 0, 7, 3, 8, -3, 5, 6, 2, 0, 0}; {-6, 1, -2, 5, 1, 7, -5, 2, 4, 2, 0, 0}; {0, 8, 6, -2, -4, 1, 7, -2, 3, 0, 0, 0}; {-1, 7, 5, -3, -5, 1, 6, -2, 2, 0, 0, 0}; {0, 8, 6, -2, -4, 2, 7, 0, 3, 0, 0, 0}; {-1, 7, 5, -3, -5, 1, 7, -1, 3, 0, 0, 0}; {-2, 6, 4, -4, -6, 0, 6, -1, 2, 0, 0, 0}; {-4, 4, 2, -6, -7, -1, -7, -1, 4, 1, 0, 0}; {-4, 4, 2, -6, -7, 0, 5, -2, 2, -1, 0, 0}; {-5, 3, 1, -7, -7, -2, 6, -1, 2, 0, 0, 0}; {-2, 5, 2, -6, -6, 0, 7, -1, 2, 0, 0, 0}; {8, -1, -4, 4, 7, -4, -4, 7, 0, 2, 0, 0}; {5, -4, -7, 1, 5, -5, -7, 7, 0, 2, 0, 0}; {8, 3, 4, 0, -7, 1, 6, 7, -2, -4, 0, 0}; {-7, 1, -1, 8, -2, 5, 3, 4, -3, 1, 0, 0}; {-6, 2, 0, -7, -1, 7, 3, 3, -3, -1, 0, 0}; {-7, 1, -1, 8, -2, 6, 3, 3, -3, 0, 0, 0}; {2, -7, 6, -2, 3, -6, 8, 5, -1, 0, 0, 0}; {1, 8, 5, -3, 2, -7, 8, 4, -1, 0, 0, 0}; {1, 8, 5, -3, 3, -6, 6, 6, -1, 1, 0, 0}; {5, -3, -5, 4, -4, 0, 2, 4, 5, 3, 0, 0}; {1, 8, 5, -3, 5, -4, 0, 5, 4, 4, 0, 0}; {3, 7, 1, 6, -4, -3, 1, -1, 8, 3, 0, 0}; {8, 0, -2, 7, 1, 7, -4, 2, 3, 2, 0, 0}; {1, 8, 5, -3, 6, -5, 0, 6, 5, 4, 0, 0}; {-5, 1, -3, 4, -4, 0, 4, -6, 7, 4, 0, 0}; {0, 7, 4, -4, 5, -6, 0, 6, 6, 3, 0, 0}; {0, 7, 4, -4, 5, -6, 0, 6, 6, 4, 0, 0}; {1, 8, 5, -3, 6, -4, 0, 6, 4, 3, 0, 0}; {0, 7, 4, -4, 5, -5, -1, 5, 4, 2, 0, 0}; {0, 7, 4, -4, 5, -5, -1, 5, 4, 3, 0, 0}; {-6, 0, -4, 3, -4, 0, 4, -6, 7, 4, 0, 0}; {-2, 5, 2, -6, 4, -7, -1, 5, 6, 3, 0, 0}; {3, -5, -7, 2, -3, 3, -6, 1, 3, 2, 0, 0}; {2, -6, 8, 1, -4, 2, -7, 1, 3, 2, 0, 0}; {2, -6, 8, 1, -4, 2, -6, 0, 3, 2, 0, 0}; {-7, -1, -5, 2, -5, 0, 3, 8, 6, 4, 0, 0}; {-7, -1, -5, 2, -5, 0, 3, -7, 6, 4, 0, 0}; {-7, -1, -5, 2, -5, 0, 3, -7, 7, 4, 0, 0}; {8, -2, -6, 1, -6, -1, 2, 8, 6, 4, 0, 0}; {8, -2, -6, 1, -6, -1, 2, 8, 7, 4, 0, 0}; {-3, 4, 1, -7, 3, -7, -2, 4, 4, 3, 0, 0}; {8, -2, -6, 1, -5, -2, 2, -7, -7, 3, 0, 0}; {8, -2, -6, 1, -5, -2, 2, -7, -7, 4, 0, 0}; {7, -3, -7, 0, -6, -2, 2, -7, 8, 4, 0, 0}; {-4, 3, 0, 8, 3, 8, -3, 5, 6, 2, 0, 0}; {7, -3, -7, 0, -6, -1, 2, 7, 5, 3, 0, 0}; {-6, 1, -2, 6, 2, 7, -4, 4, 6, 2, 0, 0}; {-2, 6, 4, -3, -6, 1, 7, 0, 3, 1, 0, 0}; {-3, 5, 3, -4, -6, -1, 6, -4, 2, 0, 0, 0}; {7, -2, -5, 3, 0, 5, -5, 3, 5, 1, 0, 0}; {5, -4, -7, 1, -2, 4, -7, 0, 3, 1, 0, 0}; {-6, 2, 0, -7, 8, -2, 6, -2, 2, 0, 0, 0}; {-7, 1, -1, 8, 7, -2, 4, -4, 1, -1, 0, 0}; {-7, 1, -1, 8, 7, -2, 5, -2, 2, 0, 0, 0}; {-6, 2, 0, -6, -1, 5, 4, 4, -3, 1, 0, 0}; {8, -3, 8, -1, 3, 6, -1, -2, 6, 2, 0, 0}; {6, -5, 6, -3, 2, 5, -3, -4, 4, 1, 0, 0}; {4, 6, -2, 2, 5, -1, -7, -2, -6, 2, 0, 0}; {-3, 0, -7, -2, 2, -1, 6, 3, 8, 5, 0, 0}; {-6, -3, 6, -5, -1, -2, 5, 2, 8, 4, 0, 0}; {-7, -1, -5, 3, -5, 0, 3, 8, 6, 4, 0, 0}; {-2, 5, 2, -5, 4, -6, -1, 4, 4, 3, 0, 0}; {3, -6, 7, 0, -6, -3, 1, 4, 4, 2, 0, 0}; {-4, 2, -2, 6, -1, 1, 5, 7, 5, 5, 0, 0}; {6, -5, 6, -3, 5, 7, -7, -5, 8, 6, 0, 0}; {-2, 2, -4, 2, -7, -6, -1, -3, 7, 2, 0, 0}; {-2, 2, -4, 2, -7, -6, -1, -2, 7, 3, 0, 0}; {3, 8, 3, -6, 2, 5, 8, -5, 8, 5, 0, 0}; {3, 8, 3, -6, 2, 5, 8, -5, 8, 6, 0, 0}; {-1, 4, -1, 6, 0, 5, 4, 1, 8, 8, 0, 0}; {-7, -2, -7, 1, 0, 6, 0, 3, 6, 5, 0, 0}; {-5, -1, -7, 0, 5, 7, -1, -3, 5, 1, 0, 0}; {7, -6, 3, -7, -2, -3, 3, 1, 8, 4, 0, 0}; {-4, 0, -6, 1, 7, 8, -1, -2, 6, 2, 0, 0}; {6, -7, 2, 8, -3, -3, 3, 1, 8, 3, 0, 0}; {6, -7, 2, 8, -3, -3, 3, 1, 8, 4, 0, 0}; {-4, 2, -2, 7, 0, 1, 5, 7, 5, 5, 0, 0}; {1, 4, -3, 4, -6, -5, 1, -1, 7, 2, 0, 0}; {2, 6, 0, 8, 1, -2, -4, -2, -7, -6, 0, 0}; {1, 2, -7, -1, -3, 6, -2, -6, -4, 3, 0, 0}; {5, 6, -3, 3, 1, 8, -1, -4, -4, 3, 0, 0}; {3, 4, -5, 1, -1, 7, -2, -5, -4, 3, 0, 0}; {-7, -5, 3, -5, -6, 2, -6, 7, -6, 2, 0, 0}; {-2, 1, -6, 3, 6, -6, 1, -1, 6, 1, 0, 0}; {-7, -7, -1, 6, 4, -6, 1, -4, -3, 4, 0, 0}; {8, 8, -2, 5, 3, -7, 0, -4, -3, 4, 0, 0}; {7, 7, -3, 4, 2, -7, 0, -5, -3, 4, 0, 0}; {3, 5, -3, 6, -7, -3, 3, 0, 7, 1, 0, 0}; {6, 6, -4, 4, 2, 8, 0, -5, -3, 4, 0, 0}; {-4, -5, 0, 7, 5, -5, 2, -3, -2, 5, 0, 0}; {8, 7, -4, 4, 2, 8, 0, -4, -3, 4, 0, 0}; {1, 3, -4, 7, -7, 3, -3, 2, 1, -5, 0, 0}; {-2, -7, -5, 3, -5, -5, 4, -7, 8, -2, 0, 0}; {-6, 4, 5, -3, 2, -3, 5, -3, -4, -1, 0, 0}; {4, 0, 3, -3, 4, -3, -4, 4, -6, -4, 0, 0}; {4, -3, -3, 4, -7, 4, -5, 0, -1, 1, 0, 0}; {4, -3, -3, 4, -7, 5, -4, 0, -1, 2, 0, 0}; {2, -5, -5, 2, 8, 3, -6, -1, -1, 1, 0, 0}; {-3, 5, 4, -5, -3, 7, -2, 4, 1, 0, 0, 0}; {2, -5, -5, 3, 7, 1, -7, 0, -2, -1, 0, 0}; {1, -6, -6, 2, 6, 0, 8, -1, -3, -2, 0, 0}; {-4, 7, -7, 3, -7, 5, -1, 8, -7, -3, 0, 0}; {-5, 6, 8, 2, 8, 4, -1, 7, 8, -4, 0, 0}; {-5, 6, 8, 2, 8, 4, -1,

7, -7, -4, 0, 0}; {5, -1, 0, -7, -2, -7, 3, -6, -5, -2, 0, 0}; {0, -4, -1, -6, 1, -2, -6, 3, 6, -5, 0, 0}; {-6, 5, 7, 1, 7, 3, -2, 6, 8, -4, 0, 0}; {-6, 5, 7, 1, 7, 3, -2, 6, -7, -4, 0, 0}; {-6, 5, 7, 1, 7, 3, -2, 6, -6, -4, 0, 0}; {-5, 3, 2, -7, -4, 6, -3, 3, 0, -1, 0, 0}; {6, 0, 1, -6, -1, -5, 4, -4, -5, -2, 0, 0}; {-6,5, 7, 1, 7, 4, -2, 7, 8, -3, 0, 0}; {0, -7, -7, 1, 5, 0, 8, -1, -2, -2, 0, 0}; {0, -7, -7, 1, 5, 0, 8, -1, -2, -1, 0, 0}; {-6, 5, 7, 1, 7, 4, -2, 7, 8, -4, 0, 0}; {-6,5 7, 1, 7, 4, -2, 7, -7, -3, 0, 0}; {-6,5, 7, 1, 7, 4, -2, 7, -7, -4, 0, 0}; {2, -5, -5, 3, 7, 2, -6, 0, -2, -1, 0, 0}; {1, -6, -6, 2, 6, 1, -7, -1, -2, -2, 0, 0}; {1, -6, -6, 2, 6, 1, -7, -1, -2, -1, 0, 0}; {-7, 4, 6, 0, 6, 3, -2, 6, -7, -4, 0, 0}; {-7, 4, 6, 0, 6, 3, -2, 6, -7, -5, 0, 0}; {5, -1, 0, -7, -2, -5, 4, -5, -5, -2, 0, 0}; {-2, 7, 7, -1, 3, -1, 7, -2, -2, -3, 0, 0}; {-3, -7, -4, 7, -1, -6, -6, 4, 8, -5, 0, 0}; {-7, 4, 6, 0, 7, 2, -2, 7, -6, -3, 0, 0}; {4, -2, -1, 8, -2, -7, 2, -5, -5, -3, 0, 0}; {-7, 4, 6, 0, 7, 3, -2, 7, -6, -3, 0, 0}; {-7, 1, 0, 7, -5, 5, -4, 2, 0, -1, 0, 0}; {-2, 7, 7, -1, 4, -1, 7, -2, -2, -2, 0, 0}; {7, -4, 8, -4, 2, 8, -7, -3, 8, 4, 0, 0}; {6, -5, 7, -5, 3, 7, 8, -3, -7, 5, 0, 0}; {6, -5, 7, -5, 3, 7, 8, -3, -7, 6, 0, 0}; {-6, 4, 5, -2, 1, -3, 6, -3, -4, -2, 0, 0}; {4, -2, -1, -7, -3, -6, 3, -6, -5, -3, 0, 0}; {2, -4, -3, 7, -4, 7, 2, -6, -4, -3, 0, 0}; {4, -2, -1, -7, -2, -6, 2, -6, -6, -2, 0, 0}; {3, -3, -2, 8, -3, -7, 2, -6, -6, -3, 0, 0}; {3, -3, -2, 8, -3, -7, 2, -6, -6, -2, 0, 0}; {1, -5, -4, 6, -5, 7, 1, 8, -5, -3, 0, 0}; {6, 1, 3, -2, 4, 1, -3, 5, 8, -5, 0, 0}; {8, 3, 5, 0, 6, 4, -2, 6, 8, -4, 0, 0}; {1, -5, -4, 6, -4, 8, 1, -7, -6, -3, 0, 0}; {0, -6, -5, 5, -5, 7, 1, 8, -4, -3, 0, 0}; {3, 8, 4, -7, 0, 6, 6, -5, 7, 5, 0, 0}; {8, -2, -5, 1, -6, -1, 2, 8, 5, 3, 0, 0}; {7, -3, -6, 0, -7, -1, 2, 8, 5, 3, 0, 0}; {8, -2, -5, 1, -5, -2, 2, -7, -7, 4, 0, 0}; {7, -3, -6, 0, -6, -3, 2, -7, 8, 3, 0, 0}; {7, -3, -6, 0, -6, -3, 2, -7, 8, 4, 0, 0}; {2, 7, 3, 8, 1, 4, 6, -4, -7, 5, 0, 0}; {7, -3, -6, 0, -6, -2, 2, -7, 7, 3, 0, 0}; {7, -3, -6, 0, -6, -2, 2, -7, 7, 4, 0, 0}; {8,-2,-5, 1, -5, -1, 3, -6, 7, 4, 0, 0}; {1, 6, 2, 7, 0, 4, 5, -5, 8, 5, 0, 0}; {7, -3, -6, 0, -6, -1, 2, 8, 5, 3, 0, 0}; {5, -5, 8, -2, 8, -2, 0, 6, 5, 3, 0, 0}; {-5, 2, 0, 7, 3, 7, -4, 4, 6, 2, 0, 0}; {-6, 1, -1, 6, 2, 6, -4, 5, 5, 2, 0, 0}; {-3, 5, 4, -4, -7, -2, 6, 0, 2, -1, 0, 0}; {-7, 0, -2, 5, 1, 6, -4, 4, 4, 2, 0, 0}; {-7, 0, -2, 5, 1, 6, -4, 4, 5, 2, 0, 0}; {3, -7, 6, -4, 7, -4, 0, 7, 5, 3, 0, 0}; {-5, 3, 2, -6, 8, -2, 4, -4, 1, 0, 0, 0}; {7, -2, -4, 3, 0, 5, -6, 2, 4, 1, 0, 0}; {-5, 3, 2, -6, 8, -2, 6, -1, 2, 0, 0, 0}; {5, -4, -6, 1, -2, 4, -6, 2, 4, 1, 0, 0}; {8, 0, -1, 7, 6, -3, 4, -3, 1, -1, 0, 0}; {0, 8, 7, -1, -1, 8, 1, 6, 1, 1, 0, 0}; {1, 8, 6, -2, 3, -6, 7, 5, -1, 1, 0, 0}; {-1, 6, 4, -4, 2, -7, 6, 4, -1, -1, 0, 0}; {-5, 2, 0, 8, 1, 7, -2, 4, 5, 3, 0, 0}; {8, -2, -5, 2, -6, 0, 3, 8, 6, 3, 0, 0}; {1, 6, 2, 8, 0, 3, 7, -4, -7, 5, 0, 0}; {-5, 2, 0, 8, 2, 7, -2, 4, 5, 3, 0, 0}; {-6, 1, -1, 7, 1, 6, -2, 4, 5, 3, 0, 0}; {1, -7, 8, 1, -4, 3, -7, 0, 1, 1, 0, 0}; {-6, 1, -1, 7, 1, 7, -3, 3, 4, 2, 0, 0}; {5, -5, 8, -1, 8, -2, 1, 7, 5, 4, 0, 0}; {4, -6, 7, -2, 8, -4, 1, 8, 7, 3, 0, 0}; {4, -6, 7, -2, 8, -4, 1, 8, 7, 4, 0, 0}; {8, -1, -3, 5, 0, 5, -4, 4, 5, 2, 0, 0}; {8, -1, -3, 5, 0, 5, -3, 3, 5, 2, 0, 0}; {-2, 3, -1, 5, -2, 2, 4, -6, 7, 4, 0, 0}; {-1, 4, 0, 6, -1, 3, 6, -4, 8, 5, 0, 0}; {2, 8, 5, -4, 6, -5, 0, 6, 6, 3, 0, 0}; {-4, 4, 3, -4, 8, -1, 6, -1, 2, 1, 0, 0}; {-2, 3, -1, 5, -2, 3, 4, -6, 7, 5, 0, 0}; {2, 8, 5, -4, 7, -5, -1, 7, 8, 3, 0, 0}; {7, -2, -4, 4, 0, 5, -5, 3, 5, 2, 0, 0}; {7, -2, -4, 4, 0, 5, -5, 4, 5, 1, 0, 0}; {-5, 3, 2, -5, 8, -2, 6, -1, 2, 1, 0, 0}; {-6, 2, 1, -6, 7, -2, 5, -3, 1, 0, 0, 0}; {5, -4, -6, 2, -2, 4, -6, 2, 4, 1, 0, 0}; {5, -4, -6, 2, -2, 4, -6, 2, 4, 2, 0, 0}; {8, 0, -1, 8, 6, -3, 3, -5, 0, -1, 0, 0}; {4, -5, -7, 1, -2, 4, -7, 2, 5, 1, 0, 0};

{3, -6, 8, 0, -3, 3, -7, 2, 4, 1, 0, 0}; {8, 0, -1, 8, 7, -4, 4, -5, 1, -1, 0, 0}; {-1, 6, 4, -4, -6, 1, 6, -2, 2, 0, 0, 0}; {7, -4, 8, -1, 1, 4, 1, -3, 4, 5, 0, 0}; {-5, -1, -6, 0, 6, 8, -1, -3, 6, 1, 0, 0}; {5, 8, 2, 7, -4, -3, 3, 1, -7, 3, 0, 0}; {-3, 2, -2, 5, -3, 2, 5, -6, 7, 4, 0, 0}; {-7, -4, 6, -4, 5, -6, 8, 3, -6, -7, 0, 0}; {7, -6, 4, -6, 3, -7, 6, 2, -7, -7, 0, 0}; {1, 5, 0, 7, 0, 6, 5, 1, 8, 8, 0, 0}; {-1, 2, -4, 3, 8, -6, 1, -1, 7, 2, 0, 0}; {-5, -2, 8, 0, 5, 8, -1, -3, 5, 0, 0, 0}; {-1, 0, 8, -1, -3, 5, -3, -7, -5, 2, 0, 0}; {5, 7, 0, -6, -5, 5, -1, 3, 2, -4, 0, 0}; {-2, -4, 1, 7, 5, -4, 3, -2, -1, 5, 0, 0}; f 0, -3, 2, 8, 6, -4, 3, -1, -1, 5, 0, 0}; {0, -3, 2, -4, 0, -1, 5, -6, -5, 6, 0, 0}; {2, -2, 2, -4, 2, -4, -5, 3, -7, -5, 0, 0}; {-1, -5, -1, -7, 0, -4, -7, 4, -7, -4, 0, 0}; {8, 0, 0, 6, -6, 4, -5, 3, 0, -1, 0, 0}; {1, -6, -5, 3, 5, 0, -7, 0, -3, -1, 0, 0}; {0, -7, -6, 2, 5, -1, 8, -1, -3, -1, 0, 0}; {-6, 2, 2, -7, -4, 5, -3, 4, 0, 0, 0, 0}; {-2, 7, 8, 0, 4, -1, 7, -2, -3, -1, 0, 0}; {3, -3, -1, 8, -3, -7, 2, -6, -6, -2, 0, 0}; {-7, 1, 1, 8, -5, 5, -4, 3, -1, -1, 0, 0}; {-3, 6, 7, -1, 3, -2, 6, -2, -3, -2, 0, 0}; {8, 3, 6, 0, 6, 3, -3, 7, 8, -3, 0, 0}; {4, -5, -6, 0, 2, -5, 2, 6, 2, 1, 0, 0}; {-2, 7, 8, 0, 4, -1, 8, -2, -3, -2, 0, 0}; {-7, 1, 1, 8, -5, 5, -3, 3, -1, -1, 0, 0}; {-7, 1, 1, 8, -5, 5, -3, 3, 0, -1, 0, 0}; {-7, 1, 1, 8, -5, 5, -3, 3, 0, 0, 0, 0}; {2, -4, -2, 7, -4, 8, 2, -6, -6, -2, 0, 0}; {-3, 6, 7, -1, 3, -2, 7, -1, -3, -2, 0, 0}; {8, 0, 0, 7, -6, 5, -3, 2, -1, 0, 0, 0}; {6, 1, 4, -2, 5, 0, -3, 7, -6, -3, 0, 0}; {0, -6, -4, 5, -5, 5, 1, -6, -4, -2, 0, 0}; {0, -6, -4, 5, -5, 5, 1, -6, -3, -2, 0, 0}; {-5, 7, -5, 6, -2, -6, -7, 3, 7, -5, 0, 0}; {5, 0, 3, -3, 4, -1, -3, 6, -6, -4, 0, 0}; {1, -5, -3, 6, -4, 7, 1, -6, -6, -3, 0, 0}; {5, 0, 3, -3, 4, 0, -4, 4, 8, -5, 0, 0}; {-6, 3, 4, -4, 1, -4, 5, -3, -3, -3, 0, 0}; {4, -1, 2, -4, 3, 0, -4, 5, 7, -5, 0, 0}; {-3, 6, 7, -1, 4, 0, 8, -3, -2, 0, 0, 0}; {-4, 5, 6, -2, 3, -1, 7, -3, -3, 0, 0, 0}; {5, -3, -3, 4, 8, 3, -5, 1, -1, -1, 0, 0}; {6, -2, -2, 5, -7, 5, -3, 1, -1, 1, 0, 0}; {-2, 8, -6, 3, -6, 6, 0, 8, -6, -3, 0, 0}; {-2, 8, -6, 3, -6, 6, 0, 8, -5, -3, 0, 0}; {2, -7, 8, -2, 3, -5, -7, 5, -1, 1, 0, 0}; {0, -5, -2, 8, 4, -1, 2, 6, -3, -3, 0, 0}; {-1, -6, -3, 7, 4, -2, 2, 6, -3, -4, 0, 0}; {3, -4, -3, 5, 0, -7, -6, -3, 2, 0, 0, 0}; {0, 5, 2, 6, -1, 3, 6, -4, 8, 4, 0, 0}; {4, -3, -2, 6, 7, 2, -6, 1, -2, 0, 0, 0}; {-2, 6, 6, -3, -3, 7, -1, 5, 0, 1, 0, 0}; {-3, 6, 7, -1, 0, 6, -2, -7, -1, -1, 0, 0}; {-4, 4, 4, -4, -4, 6, -1, 4, 0, 0, 0, 0}; {5, -4, -5, 2, 1, -5, 2, 7, 2, 2, 0, 0}; {-4, 5, 6, -1, 0, 5, -2, -6, -2, -1, 0, 0}; {1, -5, -3, 7, -7, -1, -7, 6, -4, -3, 0, 0}; {-7, 1, 1, -7, -6, 5, -4, 2, -1, 1, 0, 0}; {-7, 1, 1, -7, -5, 4, -4, 3, -1, 0, 0, 0}; {-7, 1, 1, -7, -5, 4, -3, 4, -1, 0, 0, 0}; {-7, 1, 1, -7, -5, 4, -2, 4, 0, 1, 0, 0}; {-3, 6, 7, 0, 3, -2, 6, -2, -4, -1, 0, 0}; {-3, 6, 7, 0, 3, -2, 8, -1, -3, -2, 0, 0}; {1, 8, 7, -2, -1, -7, 0, 5, 1, 0, 0, 0}; {6, -2, -2, 6, 8, 3, -5, 1, -1, -1, 0, 0}; {-5, 4, 5, -2, 1, -3, 6, -3, -4, -2, 0, 0}; {-1, -7, -5, 5, -6, 6, 0, 8, -7, -3, 0, 0}; {2, -3, 0, -5, 2, -2, -5, 4, 8, -4, 0, 0}; {2, -3, 0, -5, 2, -2, -4, 5, -7, -5, 0, 0}; {-3, 7, -7, 3, -7, 5, 0, 8, -6, -2, 0, 0}; {-4, 6, 8, 2, 8, 4, -1, 7, -6, -3, 0, 0}; {-4, 6, 8, 2, 8, 4, -1, 7, -5, -3, 0, 0}; {4, -7, 6, -5, -1, 4, 0, -4, 4, 4, 0, 0}; {3,-7, 7, -3, 7, -6, 0, 8, 7, 3, 0, 0}; {4, -6, 8, -2, 8, -4, 1, -7, 5, 3, 0, 0}; {4, -6, 8, -2, 8, -4, 1, -7, 6, 3, 0, 0}; {-2, 3, 0, 5, -2, 1, 5, -4, -7, 5, 0, 0}; {-2, 3, 0, 5, -2, 1, 5, -4, -6, 5, 0, 0}; {3, -7, 7, -3, 7, -5, 1, 8, 7, 3, 0, 0}; {-3, 2, -1, 4, -3, 0, 5, -5, -7, 4, 0, 0}; {2, 8, 6, -4, 6, -6, 0, 8, 6, 3, 0, 0}; {1, 7, 5, -5, 5, -7, -1, 7, 6, 2, 0, 0}; {-3, 2, -1, 4, -3, 1, 5, -5, 8, 4, 0, 0}; {-3, 2, -1, 4, -3, 2, 4, -6, 7, 4, 0, 0}; {1, 7, 5, -5, 6, -7, -1, 7, 7, 3, 0, 0}; {2, 8, 6, -4, 7, -5, 0, 8, 6, 3, 0, 0}; {1, 7, 5, -5, 6, -6, -1, 7, 6, 3, 0, 0}; {1, 7, 5, -5, 6, -6, -1, 7, 7, 3, 0, 0}; {5, -4, -5, 2, -2, 3, -6, 2, 4, 2, 0, 0}; {0, 6, 4, -6, 5, -7, -1, 7, 6, 3, 0, 0}; {5, -4, -5, 2, -2, 3, -5, 3, 4, 2, 0, 0}; {0, 6, 4, -6, 5, -6, -2, 6, 4, 3, 0, 0}; {5, -4, -5, 2, -1, 3, -6, 3, 4, 2, 0, 0}; {3, -6, -7, 0, -3, 2, -7, 2, 3, 1, 0, 0}; {3, -6, -7, 0, -3, 2, -7, 2, 4, 1, 0, 0}; {-3, 3, 1, 7, 3, 8, -3, 5, 5, 2, 0, 0}; {-2, 7, 8, 1, 1, 6, -1, -6, -1, -1, 0, 0}; {-4, 3, 2, -6, -7, -2, 6, -1, 2, 0, 0, 0}; {-7, -1, -3, 4, 8, -2, -5, 7, 1, 2, 0, 0}; {-3, 4, 3, -5, 0, 7, 6, 3, -2, 0, 0, 0}; {0, 5, 2, 8, -4, 1, -2, -6, 3, 3, 0, 0}; {-2, 7, 8, 2, -3, 5, 7, -5, 1, -1, 0, 0}; {1, 7, 5, -4, 5, -6, -1, 7, 4, 2, 0, 0}; {1, 7, 5, -4, 5, -5, 0, 6, 5, 3, 0, 0}; {1, 7, 5, -4, 6, -6, -1, 7, 7, 4, 0, 0}; {5, -4, -5, 3, -2, 3, -6, 3, 4, 2, 0, 0}; {0, 6, 4, -5, 5, -7, 0, 7, 6, 3, 0, 0}; {-1, 5, 3, -6, 4, -7, -1, 6, 6, 3, 0, 0}; {5, -7, 5, -6, 2, 6, 7, -3, -7, 5, 0, 0}; {-7, -2, -5, 1, -6, -1, 2, -7, 6, 3, 0, 0}; {-2, 4, 2, -7, 4, 7, -2, 6, 5, 1, 0, 0}; {-7, -2, -5, 1, -5, -2, 3, -6, 8, 4, 0, 0}; {-2, 4, 2, -7, 4, 8, -2, 6, 6, 2, 0, 0}; {-2, 4, 2, -7, 4, 8, -2, 6, 6, 3, 0, 0}; {2, -7, 8, 0, -4, 1, 8, 1, 3, 1, 0, 0}; {3, -6, -7, 1, -3, 2, -6, 2, 3, 2, 0, 0}; {2, -7, 8, 0, -4, 1, -7, 2, 3, 1, 0, 0}; {8, -3, -6, 0, -6, -2, 2, -6, 8, 4, 0, 0}; {-1, 5, 3, -6, 5, -5, -1, 6, 3, 2, 0, 0}; {-3, 4, 3, -5, 8, 0, 5, -3, 2, 0, 0, 0}; {2, -7, 8, 0, -3, 1, 8, 1, 4, 1, 0, 0}; {1, 8, 7, -1, -4, 1, 8, 0, 3, 1, 0, 0}; {-2, 5, 4, -4, -7, 0, 6, -2, 2, 0, 0, 0}; {-5, 2, 1, -6, 8, -2, 5, -3, 2, 0, 0, 0}; {-4, -2, 8, -4, 0, 0, 7, 4, -5, 4, 0, 0}; {4, 8, 4, -6, 1, 6, 7, -4, 8, 5, 0, 0}; {1, 8, 7, 0, -5, 1, -7, 0, 3, 2, 0, 0}; {3, 7, 3, -7, 1, 5, 7, -4, 8, 5, 0, 0}; {6, -7, 4, -6, 3, 8, 7, 2, -7, -7, 0, 0}; {-5, 4, 5, 3, -6, 0, -4, -1, -1, -7, 0, 0}; {-2, -3, 4, -7, 7, -3, 3, -2, -1, 5, 0, 0}; {-7, 8, -1, 5, 3, -6, 1, -4, -2, 4, 0, 0}; f-1, -3, 4, -7, 7, -3, 3, -2, -1, 5, 0, 0}; {-5, -7, 0, 6, 5, -5, 1, -3, -2, 4, 0, 0}; {6, 7, 1, -6, -4, 6, -1, 4, 2, -4, 0, 0}; {-5, -5, 4, -3, -1, 8, 1, 5, 3, -4, 0, 0}; {-7, -7, 2, -4, -2, 7, 0, 4, 3, -4, 0, 0}; {1, 0, 8, 1, 3, -5, 3, 7, 5, -2, 0, 0}; {-3, -7, -2, 5, 0, -7, 8, -2, 1, 4, 0, 0}; {6, 1, 5, -4, 6, -2, -4, 1, 3, 6, 0, 0}; {8, 3, 7, -1, 5, -1, -1, 2, -6, -7, 0, 0}; {-1, -5, 0, -7, 0, -6, -5, -1, 8, 8, 0, 0}; {-1, -5, 0, -7, 0, -6, -5, 0, 8, 8, 0, 0}; {-1, -4, 2, -4, 6, 5, -1, 1, 8, -2, 0, 0}; {-2, -5, 1, -5, 6, 5, -2, 0, 8, -2, 0, 0}; {7, 2, 6, -1, 4, -1, -3, 4, -6, -5, 0, 0}; {-6, 2, 3, -7, -4, 5, -3, 5, 0, 0, 0, 0}; {3, -2, 2, -5, 3, -2, -5, 6, -7, -4, 0, 0}; {2, -3, 1, -6, 2, -3, -5, 6, -7, -5, 0, 0}; {8, 5, -5, 6, 0, 0, -3, 0, 6, -4, 0, 0}; {8, 5, -5, 6, 4, 3, -7, -4, 6, -6, 0, 0}; {-6, 2, 3, -6, -5, 5, -3, 4, 0, 0, 0, 0}; {-3, 6, 8, 0, 3, -3, 7, -2, -4, -1, 0, 0}; {-4, 5, 7, -1, 2, -4, 7, -2, -5, -1, 0, 0}; {-4, 5, 7, -1, 3, -4, 7, -1, -4, -1, 0, 0}; {6, -2, -1, 6, -7, 2, -5, 2, -2, -1, 0, 0}; {-5, 4, 6, -2, 2, -4, 6, -2, -4, -2, 0, 0}; {-5, 4, 6, -2, 2, -4, 6, -2, -4, -1, 0, 0}; {0, -6, -3, 6, -5, 6, 2, -6, -7, -2, 0, 0}; {6, -2, -1, 6, -7, 3, -5, 2, -1, 0, 0, 0}; {5, -3, -2, 5, 8, 2, -6, 1, -2, -1, 0, 0}; {-6, 3, 5, -3, 1, -4, 5, -3, -4, -2, 0, 0}; {5, -3, -2, 5, 8, 3, -5, 2, -1, -1, 0, 0}; {3, -2, 2, -4, 3, -2, -4, 6, -7, -4, 0, 0}; {5, -3, -2, 5, -7, 2, -5, 2, -1, -1, 0, 0}; {-2, 8, -5, 4, -6, 5, 0, -6, -6, -3, 0, 0}; {3, -2, 2, -4, 3, -1, -4, 6, -7, -3, 0, 0}; {-4, 6, -7, 2, 8, 3, -1, -7, -4, -3, 0, 0}; {-5, 5, 8, 1, 7, 2, -2, 8, -5, -3, 0, 0}; {-3, 7, -6, 3, -7, 5, 0, 8, -7, -3, 0, 0}; {-3, 7, -6, 3, -7, 5, 0, -7, -7, -3, 0, 0}; {3, -5, -4, 3, 7, 2, -6, 1, -2, -1, 0, 0}; {3, -5, -4, 3, 7, 3, -5, 0, -2, 0, 0, 0}; {6, -1, 1, -7, -1, -7, 3, -3, -4, -2, 0, 0}; {0, -5, -1, -7, 1, -3, -6, 4, 7, -5, 0, 0}; {5, -2, 0, 8, -2, 8, 3, -4, -3, -3, 0, 0}; {4, -3, -1, 7, -3, 7, 3, -3, -3, -2, 0, 0}; {6, -1, 1, -7, -1, -6, 2, -4, -5, -3, 0, 0}; {2, -6, -5, 2, 7, 1, -7, 0,

-2, -1, 0, 0}; {0, 8, -7, 0, 5, -1, 7, 0, -2, -2, 0, 0}; {-1, 7, 8, -1, 4, -2, 7, -1, -2, -2, 0, 0}; {3, -5, -4, 3, 8, 3, -5, 0, -1, 1, 0, 0}; f 4, -3, -1, 7, -2, 7, 2, -4, -3, -3, 0, 0}; {1, -6, -4, 4, -2, 7, -6, -4, 1, 1, 0, 0}; {-1, 8, -6, 2, -3, 7, 8, -5, 1, -1, 0, 0}; {4, -2, 1, -6, 6, 1, 4, 6, -2, -3, 0, 0}; {1, -5, -2, 7, 4, 0, 2, 6, -2, -4, 0, 0}; {-6, 2, 3, -5, -6, 5, -4, 3, -1, 1, 0, 0}; {4, -5, -5, 2, 0, -6, 1, 6, 2, 2, 0, 0}; {4, -5, -5, 2, 0, -5, 1, 6, 2, 3, 0, 0}; {-2, 5, 5, -4, -6, -1, 7, 0, 3, 1, 0, 0}; {-7, 1, 2, -6, -6, 4, -4, 3, -1, 1, 0, 0}; {3, -6, -6, 1, 0, -7, 1, 6, 2, 2, 0, 0}; {3, -6, -6, 1, 0, -6, 1, 6, 2, 2, 0, 0}; {2, -7, -7, 0, -1, -7, 0, 5, 1, 2, 0, 0}; {-3, 3, 2, 8, 6, -1, 6, -7, 4, 3, 0, 0}; {-2, 4, 3, -7, 7, 0, 7, -6, 5, 3, 0, 0}; {2, -7, -7, 0, -1, -7, 1, 6, 1, 1, 0, 0}; {7, -1, 0, 8, -7, 3, -6, 2, -2, 0, 0, 0}; {2, -7, -7, 0, 0, -7, 1, 6, 2, 2, 0, 0}; {7, -1, 0, 8, -7, 3, -3, 3, -1, 0, 0, 0}; {6, -2, -1, 7, 8, 2, -4, 2, -2, 0, 0, 0}; {1, 8, 8, -1, -1, -7, 0, 5, 1, 2, 0, 0}; {6, -2, -1, 7, 8, 3, -5, 1, -2, 0, 0, 0}; {6, -2, -1, 7, 8, 3, -5, 1, -1, 0, 0, 0}; {5, -3, -2, 6, 7, 2, -6, 1, -2, 0, 0, 0}; {6, -2, -1, 7, 8, 3, -4, 2, -1, -1, 0, 0}; {-6, 0, -1, 5, 4, -3, 4, 8, 3, 2, 0, 0}; {5, -3, -2, 6, 7, 2, -5, 1, -2, -1, 0, 0}; {5, -3, -2, 6, 7, 2, -5, 1, -2, 0, 0, 0}; {6, -2, -1, 7, -7, 2, -4, 3, -1, 0, 0, 0}; {6, -2, -1, 7, -7, 2, -4, 3, -1, 1, 0, 0}; {5, -3, -2, 6, 8, 2, -6, 1, -2, 0, 0, 0}; {5, -3, -2, 6, 8, 2, -6, 2, -2, 0, 0, 0}; {4, -4, -3, 5, 7, 1, -6, 1, -2, 0, 0, 0}; {4, -4, -3, 5, 7, 2, -6, 1, -2, -1, 0, 0}; {4, -4, -3, 5, 7, 2, -6, 1, -2, 0, 0, 0}; {3, -5, -4, 4, 6, 1, -7, 0, -2, -1, 0, 0}; {4, -4, -3, 5, 7, 2, -5, 1, -2, -1, 0, 0}; {4, -4, -3, 5, 7, 2, -5, 1, -2, 0, 0, 0}; {3, -5, -4, 4, 7, 1, -6, 2, -2, -1, 0, 0}; {-6, 4, 7, 1, 6, 2, -2, 6, -6, -4, 0, 0}; {2, -6, -5, 3, 6, 0, -6, 1, -2, -1, 0, 0}; {7, 0, 2, -5, -1, -5, 4, -4, -5, -1, 0, 0}; {-3, 4, 4, -5, -3, 7, -2, 5, 0, 0, 0, 0}; {1, -7, -6, 2, 5, 0, 8, 0, -3, -1, 0, 0}; {-5, 5, 8, 2, 7, 4, -1, 7, -7, -4, 0, 0}; {-5, 2, 2, -7, -5, 5, -3, 3, 0, 0, 0, 0}; {0, 8, -7, 1, 4, -1, 8, -1, -3, -1, 0, 0}; {-5, 5, 8, 2, 8, 3, 0, -7, -5, -3, 0, 0}; {4, -3, -1, 8, -3, 7, 3, -4, -3, -2, 0, 0}; {4, -3, -1, 8, -3, 7, 3, -4, -3, -1, 0, 0}; {8, 2, 5, -1, 5, 1, -3, 6, -7, -4, 0, 0}; {8, 2, 5, -1, 5, 1, -2, 7, -7, -3, 0, 0}; {6, -1, 1, -6, -1, -5, 4, -5, -5, -1, 0, 0}; {-1, 7, 8, 0, 4, -1, 7, -1, -3, -2, 0, 0}; {-1, 7, 8, 0, 4, -1, 8, -1, -3, -2, 0, 0}; {-7, 3, 6, 0, 7, 1, -2, 8, -5, -3, 0, 0}; {-7, 3, 6, 0, 7, 1, -1, -7, -5, -4, 0, 0}; {-7, 3, 6, 0, 7, 1, -1, -7, -5, -3, 0, 0}; {-7, 3, 6, 0, 7, 2, -2, 8, -6, -3, 0, 0}; {-7, 3, 6, 0, 7, 2, -1, 8, -5, -3, 0, 0}; {-7, 3, 6, 0, 7, 3, -2, 7, -7, -3, 0, 0}; {1, -6, -4, 5, -2, 6, -6, -6, 1, -1, 0, 0}; {-4, 4, 5, -3, 7, -1, -3, 1, 4, 2, 0, 0}; {-7, -2, -4, 1, -6, -2, 3, -6, 7, 3, 0, 0}; {-2, 4, 3, -7, 4, 8, -1, 7, 6, 3, 0, 0}; {-3, 3, 2, 8, 3, 7, -2, 6, 6, 3, 0, 0}; {-3, 3, 2, 8, 3, 7, -2, 6, 6, 2, 0, 0}; {-4, 2, 1, 7, 2, 6, -2, 6, 6, 2, 0, 0}; {-2, 4, 3, -7, 4, -7, -2, 6, 4, 3, 0, 0}; {8, -3, -5, 0, -6, -2, 3, -6, 7, 4, 0, 0}; {-3, 3, 2, 8, 3, 8, -2, 6, 5, 2, 0, 0}; {-3, 5, 6, -2, -4, 6, -2, 4, 0, 1, 0, 0}; {7, -1, 0, 8, 6, -5, 3, -3, 1, 1, 0, 0}; {-4, 2, 1, 7, 3, 6, -3, 5, 6, 3, 0, 0}; {5, -4, -4, 4, 1, -5, 3, 7, 2, 1, 0, 0}; {2, -7, -7, 1, -2, -6, 1, 5, 2, 1, 0, 0}; {-3, 4, 4, -4, -7, -1, 7, 0, 2, 1, 0, 0}; {-4, 3, 3, -5, 8, -2, 6, -1, 2, 1, 0, 0}; {8, -2, -3, 4, 0, 5, -5, 4, 5, 2, 0, 0}; {1, 8, 8, 0, -2, -7, 0, 5, 1, 1, 0, 0}; {-3, 4, 4, -4, -6, -2, 5, -2, 3, 1, 0, 0}; {6, -4, -5, 2, -1, 3, -6, 3, 4, 2, 0, 0}; {-6, 0, -1, 6, 4, -3, 5, -7, 3, 3, 0, 0}; {-7, -1, -2, 5, 3, -3, 4, 8, 3, 3, 0, 0}; {-6, 5, -7, 5, -3, -7, 8, 3, 7, -6, 0, 0}; {-6, 5, -7, 5, -3, -7, 8, 3, 7, -5, 0, 0}; {-3, 3, 2, -7, 3, 7, -2, 6, 5, 3, 0, 0}; {6, -5, -7, -1, 8, -4, 2, -7, 7, 3, 0, 0}; {0, 7, 7, -1, -6, 0, 8, 1, 2, 1, 0, 0}; {3, 7, 4, -7, 1, 6, 6, -4, 8, 5, 0, 0}; {1, 5, 2, 7, -1, 4, 6, -4, 8, 4, 0, 0}; {5, -4, -4, 4, 0, -5, 1, 6, 2, 2, 0, 0}; {6, -5, -7, -1, -7, -4, 2, -7, 7, 3, 0, 0}; {6, -5, -7, -1, -7, -4, 2, -7, 7, 4, 0, 0}; {6, -5, -7, -1, -7, -4, 2, -7, 8, 3, 0, 0}; {6, -5, -7, -1, -7, -4, 2, -7, 8, 4, 0, 0}; {0, 7, 7, -1, -5, 0, 8, 1, 2, 1, 0, 0}; {5, -6, 8, -2, 8, -4, 1, 8, 7, 3, 0, 0}; {5, -6, 8, -2, 8, -4, 1, -7, 7, 4, 0, 0}; {5, -6, 8, -2, 8, -4, 1, -7, 8, 4, 0, 0}; {-6, 0, -1, 6, 1, 6, -4, 5, 5, 2, 0, 0}; {4, -7, 7, -3, 7, -5, 0, 8, 7, 3, 0, 0}; {-2, 5, 5, -3, -7, -1, 7, 0, 2, 1, 0, 0}; {-7, -1, -2, 5, 0, 5, -4, 5, 5, 2, 0, 0}; {5, 2, -7, -4, -6, 0, 6, 0, 1, 6, 0, 0}; {2, -1, 6, -5, -7, -2, 4, -1, 0, 5, 0, 0}; {4, 5, 0, -7, -5, 5, -2, 3, 2, -5, 0, 0}; {-7, 7, -1, 6, 4, -6, 0, -6, -3, 3, 0, 0}; {-7, -7, 3, -4, -2, 7, 0, 5, 3, -4, 0, 0}; {7, 7, 1, -6, -4, 6, -1, 4, 3, -4, 0, 0}; {-2, -3, 6, -1, 1, -7, 2, 6, 4, -3, 0, 0}; {-4, 8, -2, 5, -1, -7, 8, -1, 2, 5, 0, 0}; {-5, 7, -3, 4, -2, 8, 8, -2, 1, 4, 0, 0}; {-6, 6, -4, 3, -3, 7, 7, -3, 0, 3, 0, 0}; {-3, -4, 5, -1, 1, -7, 2, 5, 4, -3, 0, 0}; {-5, -6, 3, -3, -1, 8, 1, 4, 4, -3, 0, 0}; {-2, -5, 2, -6, -5, 2, -7, -5, 8, 0, 0, 0}; {-1, -4, 3, -4, 6, 5, -1, 1, -7, -2, 0, 0}; {-2, -5, 2, -5, 5, 4, -1, 1, -7, -2, 0, 0}; {-4, -7, 0, -7, 5, 4, -3, -1, 8, -3, 0, 0}; {7, 3, -7, 2, -6, -3, 1, 0, 5, 5, 0, 0}; {-4, -7, 0, -6, 4, 4, -2, 0, 8, -3, 0, 0}; {5, 1, 7, 0, -7, 8, 2, 4, -6, -1, 0, 0}; {-6, 7, -2, 8, 3, 3, -3, -1, 8, -4, 0, 0}; {-6, 7, -2, 8, 3, 3, -3, -1, 8, -3, 0, 0}; {-7, 6, -3, 7, 2, 3, -3, -1, 8, -4, 0, 0}; {5, 1, 7, 0, -5, -7, 1, 3, -5, -1, 0, 0}; {2, -5, -2, 4, -1, 8, -5, -4, 3, 0, 0, 0}; {4, -1, 4, -3, 2, -3, -3, 2, -7, -7, 0, 0}; {-1, -6, -1, 8, 0, -4, -6, 6, -7, -5, 0, 0}; {4, 0, 6, 0, -7, 8, 1, 3, -6, -1, 0, 0}; {2, -2, 4, -2, 7, 6, 1, 2, -7, -3, 0, 0}; {-4, -7, 0, -5, 5, -6, -2, 7, -7, 1, 0, 0}; {2, -5, -2, 5, -4, 6, 1, -4, -4, -3, 0, 0}; {1, -3, 3, -3, 7, 6, 0, 2, -7, -2, 0, 0}; {1, -3, 3, -3, 7, 6, 0, 2, -6, -2, 0, 0}; {6, -2, 0, 6, -4, 8, 3, -1, -2, -2, 0, 0}; {8, 3, 8, 1, -3, -6, 1, 2, -6, -2, 0, 0}; {-4, -7, 0, -5, -1, -6, -6, 4, 7, -4, 0, 0}; {7, -1, 1, 8, -7, 2, -4, 4, -1, 1, 0, 0}; {6, -2, 0, 7, 8, 2, -6, 2, -2, 0, 0, 0}; {1, 8, -7, -1, -1, 8, 0, 6, 1, 1, 0, 0}; {-7, 2, 5, -3, 0, -5, 5, -3, -5, -1, 0, 0}; {-1, 6, 7, -3, -2, 7, -1, 6, 1, 1, 0, 0}; {4, -4, -2, 5, 7, 1, -6, 3, -2, 0, 0, 0}; {1, -4, 1, -5, 1, -3, -5, 6, -7, -4, 0, 0}; {2, -6, -4, 3, 6, 0, 8, 1, -3, -1, 0, 0}; {1, -7, -5, 2, 5, -1, -7, -1, -4, -1, 0, 0}; {6, -1, 2, -6, -2, -7, 4, -5, -6, -2, 0, 0}; {2, -6, -4, 3, 7, 0, -6, 2, -1, -1, 0, 0}; {-7, 3, 7, 0, 6, 2, -2, 7, 8, -4, 0, 0}; {4, -3, 0, 8, -3, -7, 3, -5, -6, -2, 0, 0}; {-4, 4, 6, -3, 2, -5, 6, -1, -2, -1, 0, 0}; {-2, 6, 8, -1, 4, -2, 7, -1, -3, -2, 0, 0}; {7, 1, 5, -2, 5, 1, -3, 6, -7, -4, 0, 0}; {2, -5, -2, 6, -4, 7, 2, -5, -6, -3, 0, 0}; {5, -1, 3, -4, 3, -1, -4, 7, -7, -4, 0, 0}; {5, -1, 3, -4, 3, -1, -4, 8, -6, -4, 0, 0}; {-4, 4, 6, -3, 2, -3, 6, -2, -3, -3, 0, 0}; {6, 0, 4, -3, 5, -1, -3, 8, -6, -4, 0, 0}; {0, -7, -4, 4, -5, 5, 0, -5, -4, -4, 0, 0}; {0, -7, -4, 4, -5, 5, 1, -5, -4, -3, 0, 0}; {0, -7, -4, 4, -5, 5, 1, -5, -4, -2, 0, 0}; {-5, 3, 5, -4, 2, -4, 5, -2, -4, -3, 0, 0}; {-5, 3, 5, -4, 2, -4, 5, -2, -3, -2, 0, 0}; {5, -1, 3, -4, 4, 0, -4, 6, -7, -4, 0, 0}; {-4, 4, 6, -3, 3, -2, 6, -2, -3, -1, 0, 0}; {4, -2, 2, -5, 4, -2, -5, 7, -7, -5, 0, 0}; {-3, 5, 7, -2, 5, 2, -1, -4, -4, -3, 0, 0}; {-1, 8, -5, 3, -2, 7, 8, -4, 1, 0, 0, 0}; {-2, 7, -6, 2, -3, 6, -7, -5, 1, -1, 0, 0}; {6, -2, 0, 7, 1, -7, -3, -3, 3, 1, 0, 0}; {-1, 8, -5, 3, -2, 8, 8, -4, 1, 0, 0, 0}; {7, -1, 1, 8, 2, -5, -3, -4, 3, -1, 0, 0}; {8, -3, -4, 0, 7, -1, -6, -7, 2, 4, 0, 0}; {-3, 6, -7, 1, -3, 7, 7, -5, 0, 0, 0, 0}; {-5, 4, 7, -1, -5, 5, 7, -7, 0, -2, 0, 0}; {-6, 3, 6, -2, -6, 5, 6, -7, 0, -2, 0, 0}; {3, 8, 7, -4, 7, -6, 0, 8, 7, 4, 0, 0}; {-2, 6, 8, 0, -1, 6, -2, -7, -1, 0, 0, 0}; {-5, 2, 3, -6, 8, -3, 4, -2, 2, 1, 0, 0}; {0, 7, 8, -1, -2, 7, 0, 6, 1, 2, 0, 0}; {5, -3, -1, 7, 7, 2, -6, 1, -2, 0, 0, 0}; {8, 7, 0, -1, 6, -5, 2, -6, 1, -2, 0, 0}; {4, -4, -2, 6, 7, 1, -6, 1, -2, 0, 0, 0}; {-2, 5, 6, -3, -3, 6, -1, 5, 0, 1, 0, 0}; {-3, 4, 5, -4, -4, 6, -2, 4, 0, 1, 0, 0}; {-4, 3, 4, -5, -5, 5, -2, 3, -1, 1, 0, 0}; {3, -5, -3, 5, 7, 0, -5, 3, -1, 0, 0, 0}; {-3, 4, 5, -4, -3, 6, -1, 5, 1, 1, 0, 0}; {-4, 3, 4, -5, -4, 5, -2, 4, 0, 1, 0, 0}; {-3, 4, 5, -4, -3, 6, -1, 6, 1, 1, 0, 0}; {1, -7, -5, 3, 5, -1, -7, 1, -3, 0, 0, 0}; {2, -6, -4, 4, 6, 0, -6, 3, -2, 0, 0, 0}; {0, 8, -6, 2, 4, -2, -7, 0, -3, 0, 0, 0}; {1, -7, -5, 3, 5, -1, -6, 2, -2, 0, 0, 0}; {-4, 3, 4, -5, -4, 6, -2, 4, 0, 0, 0, 0}; {-5, 2, 3, -6, -5, 5, -3, 3, -1, 0, 0, 0}; {-7, 3, 7, 1, 6, 1, -2, 8, -5, -3, 0, 0}; {6, -1, 2, -5, -1, -7, 5, -2, -4, -2, 0, 0}; {-1, 7, -7, 1, 4, -2, 7, -1, -4, -1, 0, 0}; {4, -3, 0, -7, -3, 8, 3, -5, -6, -2, 0, 0}; {0, 8, -6, 2, 5, -1, -7, 1, -2, -1, 0, 0}; {0, 8, -6, 2, 5, -1, -7, 1, -2, 0, 0, 0}; {-1, 7, -7, 1, 4, -2, 8, 0, -3, -1, 0, 0}; {4, -3, 0, -7, -3, 8, 4, -4, -6, -2, 0, 0}; {-3, 5, 7, -1, 2, -3, 6, -2, -4, -1, 0, 0}; {-1, 7, -7, 1, 5, -2, -7, 1, -1, -1, 0, 0}; {4, -3, 0, -7, -2, 8, 4, -3, -4, -2, 0, 0}; {6, 0, 4, -2, 4, -1, -4, 6, -6, -4, 0, 0}; {7, 1, 5, -1, 5, 0, -2, 8, -6, -4, 0, 0}; {7, 1, 5, -1, 5, 0, -2, 8, -6, -3, 0, 0}; {-2, 6, 8, 0, 4, -2, 8, 0, -2, -2, 0, 0}; {-3, 5, 7, -1, 3, -3, 7, 0, -3, -1, 0, 0}; {7, 1, 5, -1, 5, 1, -2, 7, -7, -3, 0, 0}; {-4, 4, 6, -2, 2, -3, 6, -1, -4, -2, 0, 0}; {6, 0, 4, -2, 5, -1, -3, 8, -6, -4, 0, 0}; {7, -2, -1, 6, -6, 3, -5, 3, -1, -1, 0, 0}; {-2, 7, -6, 3, -6, 4, 0, -6, -4, -3, 0, 0}; {3, -3, 1, -5, 3, -2, -5, 6, -7, -4, 0, 0}; {2, -4, 0, -6, 2, -3, -5, 6, -7, -5, 0, 0}; {6, -3, -2, 5, -4, 6, 3, 0, -2, -2, 0, 0}; {-7, 2, 5, -2, -7, 3, 6, -7, 0, -1, 0, 0}; {5, -2, 1, -6, 7, 2, 3, 7, -1, -3, 0, 0}; {-4, 4, 6, -1, -4, 6, -2, 4, 0, -1, 0, 0}; {5, -4, -3, 5, 1, -5, 2, 7, 2, 1, 0, 0}; {-7, 1, 3, -4, -7, 4, -4, 2, -1, 0, 0, 0}; {2, -7, -6, 2, -2, -7, 0, 5, 1, 1, 0, 0}; {7, -3, -3, 4, -1, 4, -5, 4, 3, 1, 0, 0}; {-1, 4, 3, -7, 4, 8, -1, 7, 6, 3, 0, 0}; {-5, 1, 1, 8, 4, -2, 5, 8, 4, 3, 0, 0}; {0, 5, 4, -6, 5, 8, -1, 7, 6, 4, 0, 0}; {5, -5, -5, 2, -2, 2, -6, 3, 4, 1, 0, 0}; {5, -3, -1, 8, 7, 2, -6, 1, -2, 0, 0, 0}; {6, -3, -2, 6, 5, -6, 2, -4, 1, 0, 0, 0}; {7, -3, -3, 4, 2, -4, 2, 7, 2, 2, 0, 0}; {7, -3, -3, 4, 2, -4, 3, 7, 3, 3, 0, 0}; {4, -6, -6, 1, 0, -6, 1, 6, 1, 1, 0, 0}; {-2, 6, 8, 1, 3, -2, 7, -1, -4, 0, 0, 0}; {8, -1, 0, 8, -7, 3, -4, 3, -2, 0, 0, 0}; {-5, 3, 5, -2, 1, -4, 5, -3, -5, -1, 0, 0}; {0, 6, 6, -3, 3, -5, 7, 4, 0, -1, 0, 0}; {6, -1, 2, -4, 8, 2, 3, 8, -1, -2, 0, 0}; {-5, 3, 5, -2, -6, 5, 5, -7, 1, -2, 0, 0}; {2, 7, 6, -4, 5, -6, 0, 8, 6, 3, 0, 0}; {-1, 8, -5, 6, 3, -2, 0, 5, -2, -4, 0, 0}; {-6, 2, 4, -2, -6, 5, -3, 3, -1, -1, 0, 0}; {1, 6, 5, -4, 5, -7, 0, 8, 5, 3, 0, 0}; {-6, -2, -4, 2, -5, -2, 4, -5, 7, 4, 0, 0}; {-6, -2, -4, 2, -5, -2, 4, -5, 8, 4, 0, 0}; {-7, -3, -5, 1, -6, -3, 3, -6, 8, 3, 0, 0}; {8, -4, -6, 0, -7, -4, 3, -6, 8, 3, 0, 0}; {-7, -3, -5, 1, -6, -2, 3, -6, 8, 3, 0, 0}; {-2, 5, 6, -1, -4, 7, -2, 4, 0, 1, 0, 0}; {-7, -1, -1, 8, 5, -3, -7, -2, 4, 0, 0, 0}; {-7, -3, -5, 4, -7, 8, 1, -6, -4, 4, 0, 0}; {2, 5, 3, -5, -1, -3, 5, -3, -2, 6, 0, 0}; {1, 4, 2, -6, -2, -4, 5, -3, -2, 6, 0, 0}; {0, 3, 1, -7, -2, -4, 4, -4, -3, 5, 0, 0}; {-1, 2, 0, -7, -4, -5, 5, -2, -1, 8, 0, 0}; {-7, -5, 8, 0, 3, 0, -7, 0, 0, -7, 0, 0}; {3, 2, -4, 2, 4, -3, 4, -7, 6, -2, 0, 0}; {0, -3, 5, -6, 8, -2, 3, -2, 0, 5, 0, 0}; {2, 1, -5, 2, 3, -4, 4, 8, 5, -3, 0, 0}; {-7, 3, 8, -4, 7, -1, -3, 3, 4, 5, 0, 0}; {-7, 5, -4, 3, -3, 7, 7, -2, 1, 4, 0, 0}; {-1, -6, 0, 6, 1, -7, -7, -1, 2, 4, 0, 0}; {-3, -6, 2, -6, 7, -4, 2, -7, -3, 2, 0, 0}; {-4, -7, 1, -6, 3, 3, -1, 0, -7, -3, 0, 0}; {2, -2, 5, -3, 5, 6, 3, 4, 7, 8, 0, 0}; {4, 0, 7, -1, 8, 7, 2, 3, -5, -2, 0, 0}; {-6, 7, -1, 8, 2, 4, -2, 0, -7, -4, 0, 0}; {4, 0, 7, -1, 8, -5, 2, 3, -3, -3, 0, 0}; {-7, 6, -2, 7, 4, -7, -1, 7, -5, 1, 0, 0};

{1, -5, 0, 6, 1, -6, -7, -1, 2, 3, 0, 0}; {-5, 6, -4, 3, -1, -5, 4, 4, -3, 0, 0, 0}; {3, -1, 6, -1, 3, -3, -3, 7, -7, -3, 0, 0}; {7, 1, 6, -3, -1, 7, 6, -1, -3, 0, 0, 0}; {0, -4, 3, -4, 4, 5, 2, 3, 6, 8, 0, 0}; {3, -3, 2, -7, 0, -1, -5, -7, -5, -5, 0, 0}; {8, 3, -7, 1, -7, -6, 6, 5, -7, -7, 0, 0}; {1, -3, 4, -3, 7, 7, 0, 2, -6, -2, 0, 0}; {-6, 2, 5, -6, 4, -4, -1, -2, 5, 1, 0, 0}; f-7, 6, -2, 8, -4, 7, -7, 4, 7, -5, 0, 0}; {2, -2, 5, -1, 2, -3, -4, 6, -7, -3, 0, 0}; {-5, 6, -4, 5, 7, 1, -1, 8, -4, -2, 0, 0}; {1, -3, 4, -2, 1, -4, -4, 6, -7, -4, 0, 0}; {-1, -5, 2, -4, 0, -5, -5, 5, 8, -4, 0, 0}; {-6, 5, -5, 4, -5, -5, 6, 7, -7, -7, 0, 0}; {5, 0, 6, -1, 6, 8, 5, 4, 8, 8, 0, 0}; {2, -4, 1, -7, 0, -2, -7, -7, -6, -6, 0, 0}; {1, -5, 0, 8, -1, -3, -6, 8, -6, -5, 0, 0}; {0, -6, -1, 7, -2, -3, -7, 8, -6, -6, 0, 0}; {-3, 7, -4, 4, -5, -5, 8, 6, -7, -6, 0, 0}; {4, -2, 3, -5, 3, -2, -5, 6, -7, -5, 0, 0}; {-7, 4, -6, 3, -4, -6, 4, 5, -4, -1, 0, 0}; {-2, -6, 1, -5, 5, 5, -1, 1, -7, -3, 0, 0}; {-7, 2, 6, -3, 4, 1, -3, -5, -5, -4, 0, 0}; {-2, 8, -3, 5, -3, -5, 8, 8, -7, -6, 0, 0}; {-4, 8, -1, -7, 3, 4, -2, 0, -7, -4, 0, 0}; {-3, 7, -4, 4, -4, -5, 8, 7, -7, -6, 0, 0}; {-3, -7, 0, -6, 4, 6, -1, 1, -6, -3, 0, 0}; {7, 4, -4, 7, 2, 7, -4, 5, 8, 0, 0, 0}; {-3, 6, -6, 1, -7, 3, -1, -6, -5, -4, 0, 0}; {5, -3, 0, 6, -3, 7, 2, -3, -4, -3, 0, 0}; {8, 3, -7, 2, -4, -5, 3, 4, -4, -1, 0, 0}; {6, 1, 7, 0, -6, -7, 2, 3, -5, -2, 0, 0}; {-5, 7, -2, 8, 3, 3, -2, 0, 8, -4, 0, 0}; {6, 1, 7, 0, -5, -7, 1, 2, -6, -2, 0, 0}; {0, -6, -1, 7, 2, -2, 6, 6, -2, 0, 0, 0}; {1, -6, -2, 5, 0, -7, -7, -2, 2, 1, 0, 0}; {-4, 5, -7, 0, -5, 5, 8, -6, 0, 0, 0, 0}; {-5, 4, 8, -1, -6, 4, 8, -7, 0, -1, 0, 0}; {5, -3, 0, 6, 1, -7, -3, -4, 3, 0, 0, 0}; {-7, 2, 6, -3, -7, 3, 7, 8, 0, -2, 0, 0}; {1, -4, 2, -5, -6, 8, -3, -3, 7, -6, 0, 0}; {-2, -2, -7, 8, 0, 4, -4, 5, -3, -3, 0, 0}; {0, 8, -5, 2, 4, -2, 8, -1, -4, -1, 0, 0}; {1, -6, -2, 6, -6, 6, 2, -6, 8, -2, 0, 0}; {7, -2, 0, 6, -7, 3, -5, 4, -1, 0, 0, 0}; {-3, 6, -6, 2, -7, 3, -1, -6, -5, -4, 0, 0}; {-4, 5, -7, 1, 8, 2, -2, -7, -5, -4, 0, 0}; {8, 0, 3, -6, 0, -6, 4, -3, -4, -3, 0, 0}; {-5, 4, 8, 0, 7, 2, -2, -6, -5, -4, 0, 0}; {0, -6, -1, 8, 0, -4, -7, 6, -7, -5, 0, 0}; {-4, 5, -7, 1, 8, 3, -1, -7, -7, -4, 0, 0}; {-4,5,-7, 1, 8, 3, -1, -7, -6, -4, 0, 0}; {-4,5,-7, 1, 8, 3, -1, -7, -5, -4, 0, 0}; {1, -5, 0, -7, 1, -3, -6, 6, -7, -5, 0, 0}; {-6, 3, 7, -1, 6, 2, -2, 8, -7, -5, 0, 0}; {2, -6, -3, 4, -6, 5, 1, -2, -3, -2, 0, 0}; {5, 0, 6, 0, -7, 8, 2, 3, -5, -2, 0, 0}; {-5, 4, 8, 0, 8, 2, -2, -7, -5, -4, 0, 0}; {0, -6, -1, 8, 1, -4, -6, 6, -7, -5, 0, 0}; {5, -3, 0, 7, -2, 8, 2, -4, -4, -3, 0, 0}; {0, -6, -1, 8, 1, -2, 7, 7, -2, 0, 0, 0}; {4, -1, 5, -1, -7, 7, 2, 3, -6, -2, 0, 0}; {-1, -7, -2, 7, 1, -2, 6, 6, -2, 0, 0, 0}; {3, -2, 4, -2, -7, 7, 1, 2, -6, -2, 0, 0}; {3, -4, 0, 8, 3, -4, -6, -1, 1, 3, 0, 0}; {1, -6, -2, 6, 1, -6, -7, -2, 1, 2, 0, 0}; {2, -6, -3, 4, -1, 8, -5, -5, 2, -1, 0, 0}; {7, 0, 4, -4, 8, 2, 6, 7, -1, -2, 0, 0}; {1, -7, -4, 3, -2, 8, -6, -7, 1, -2, 0, 0}; {1, -7, -4, 3, -2, 8, -6, -6, 2, -2, 0, 0}; {6, -1, 3, -5, 7, 2, 5, 7, -1, -3, 0, 0}; {5, -2, 2, -6, 6, 1, 5, 7, -1, -2, 0, 0}; {3, -4, 0, 8, 6, 1, 6, 3, -4, -3, 0, 0}; {-1, 8, -4, 5, 3, -1, 0, 5, -2, -4, 0, 0}; {6, -2, 1, -7, 8, 2, -5, 2, -1, 0, 0, 0}; {-2, 5, 7, -2, -3, 6, -1, 5, 1, 1, 0, 0}; {0, 8, -5, 3, 4, -2, -7, 0, -3, 0, 0, 0}; {-6, 1, 3, -6, -6, 4, -3, 3, -1, 0, 0, 0}; {5, -5, -4, 2, 1, -6, 2, 7, 2, 2, 0, 0}; {5, 4, -2, -3, 5, -6, 1, 8, -1, -3, 0, 0}; {-7, 0, 2, -7, -6, 3, -3, 4, 0, 1, 0, 0}; {-3, 5, 8, 0, 2, -4, 8, -1, -4, 0, 0, 0}; {-4, 4, 7, -1, 1, -4, 6, -3, -5, -1, 0, 0}; {7,-2,0, 7, 8, 2, -5, 2, -2, 0, 0, 0}; {8, -1, 1, 8, -7, 3, -4, 4, -1, 1, 0, 0}; {7, -1, 2, -6, -2, -7, 4, -4, -6, -2, 0, 0}; {8, 0, 3, -5, 0, -6, 5, -2, -4, -2, 0, 0}; {2, -3, 3, -2, 8, 6, 1, 2, -6, -2, 0, 0}; {-1, 5, 6, -4, 1, -5, 7, 3, -1, 1, 0, 0}; {4, -5, -3, 4, -6, 5, 2, -1, -3, -2, 0, 0}; {4, -5, -3, 4, -5, 5, 2, 0, -3, -2, 0, 0}; {8, 0, 3, -5, 3, -2, -3, -5, -6, -4, 0, 0}; {-1, 8, -4, 5, 0, -7, 8, -3, 0, 2, 0, 0}; {1, -7, -4, 4, -2, 7, -6, -7, 1, -1, 0, 0}; {3, -5, -2, 7, 5, 1, -7, 0, -2, 0, 0, 0}; {8, 2, 7, 2, 3, -7, 0, -2, -6, -6, 0, 0}; {7, 7, 2, 3, -5, 2, -6, 4, -4, -4, 0, 0}; {3, -7, -6, 1, 0, -7, 1, 7, 2, 2, 0, 0}; {5, -4, -2, 6, 7, 1, -5, 2, -2, 1, 0, 0}; {0, 6, 7, -2, -2, 7, 0, 7, 1, 2, 0, 0}; {-5, 0, 0, 7, 0, 5, -3, 6, 5, 2, 0, 0}; {5, -7, 8, -2, 7, -5, 1, -7, 7, 3, 0, 0}; {2, -7, -5, 4, 0, -7, 7, -4, 2, 0, 0, 0}; {8, -2, -1, 7, 2, -3, 3, 7, 3, 2, 0, 0}; {-3, 4, 6, -1, -5, 7, -2, 3, 1, 1, 0, 0}; {-4, 3, 5, -2, -6, 6, -3, 3, 0, 1, 0, 0}; {4, -6, -5, 3, -1, -6, 1, 6, 2, 2, 0, 0}; {5, -1, 4, 0, 1, 7, 0, -3, 8, -6, 0, 0}; {8, -1, 2, -3, 8, 2, 3, 8, 1, -1, 0, 0}; {7, -7, 7, -2, 2, -1, 7, -1, -1, 7, 0, 0}; {-6, 5, -4, -4, 3, 0, 7, -4, 3, 2, 0, 0}; {-1, 0, -3, 4, 7, 3, -5, 2, 1, -7, 0, 0}; {-2, -1, -4, 3, 6, 2, -6, 2, 1, 8, 0, 0}; {8, 8, 4, -5, -4, 8, -1, 5, 3, -6, 0, 0}; {-7, -7, 5, -4, -3, 8, -1, 5, 3, -6, 0, 0}; {7, 7, 3, -6, -4, 7, -2, 5, 3, -6, 0, 0}; {-6, -4, -6, 3, 7, 1, -7, -1, -1, -7, 0, 0}; {-1, -2, -7, 0, 1, -5, 2, 7, 4, -4, 0, 0}; {-4, -5, 6, -3, -1, -7, 1, 6, 4, -4, 0, 0}; {2, 0, -6, 1, 6, 1, 6, 4, 6, 8, 0, 0}; {-7, 6, -1, 6, -3, 7, 7, 4, 7, -7, 0, 0}; {5, 1, -7, -1, -5, 2, 5, -4, 0, 3, 0, 0}; {1, -4, 3, 8, 3, -5, -6, 0, 2, 5, 0, 0}; {5, -1, 5, -7, 4, -4, -5, 2, 4, 4, 0, 0}; {5, 2, -5, 3, -3, 0, -3, -1, 8, -6, 0, 0}; {-6, 5, -4, 2, -2, 7, 7, -2, 0, 3, 0, 0}; {1, -3, 5, -3, 1, -5, -4, 8, -7, -5, 0, 0}; {2, -2, 6, -2, 6, 6, 2, 2, -5, -3, 0, 0}; {1, -3, 5, -3, 6, 6, 1, 2, -6, -3, 0, 0}; {0, -4, 4, -4, 5, 6, 1, 2, -6, -4, 0, 0}; {-6, 5, -4, 3, -5, -5, 5, 5, -3, -2, 0, 0}; {-7, 4, -5, 2, -6, -5, 5, 5, -3, -3, 0, 0}; {7, 2, -7, 0, 8, -7, 6, 5, -7, -7, 0, 0}; {-3, 8, -1, 6, -2, 0, 6, 6, -1, -1, 0, 0}; {-4, 7, -2, 5, -2, -4, 5, 5, -3, -1, 0, 0}; {0, -4, 4, -4, 6, 8, 0, 2, -5, -3, 0, 0}; {-2, -6, 2, -6, 4, 6, -1, 1, -6, -4, 0, 0}; {8, 3, -6, 1, -6, -5, 4, 4, -4, -3, 0, 0}; {-2, 8, -2, 4, -4, -4, -7, 7, -6, -6, 0, 0}; {8, 3, -6, 1, -6, -4, 4, 4, -3, -3, 0, 0}; {-1, -5, 3, -5, 5, -7, 0, 2, -4, -3, 0, 0}; {-1, -5, 3, -5, 6, 7, -1, 1, -6, -3, 0, 0}; {-3,-7, 1, -7, 4, 5, -2, 0, -7, -4, 0, 0}; {8, 3, -6, 1, -4, -6, 2, 3, -5, -2, 0, 0}; {6, 1, 8, -1, -5, 4, 5, -4, -1, 2, 0, 0}; {1, -5, 1, 7, 2, -5, -6, 0, 2, 4, 0, 0}; {6, 1, 8, -1, -4, 5, 5, -3, -1, 2, 0, 0}; {-7, 1, 5, -7, 3, -4, -1, -2, 5, 1, 0, 0}; {-2, -6, 2, -6, -5, 2, -7, -6, -6, 1, 0, 0}; {-5, 8, 1, -6, -3, 7, -5, 7, 8, -6, 0, 0}; {7, 4, -3, 7, -5, 6, -7, 4, 7, -5, 0, 0}; {-1, -5, 3, -4, -1, -7, -4, 7, 8, -4, 0, 0}; {0, -4, 4, -3, 1, -5, -3, 7, -7, -4, 0, 0}; {-1, -5, 3, -4, 4, 5, 0, 1, -6, -3, 0, 0}; {-3, -7, 1, -6, 2, 3, -1, 0, -7, -4, 0, 0}; {-3, -7, 1, -6, 2, 4, -1, 0, -6, -4, 0, 0}; {-5, 7, -1, 8, 0, 2, -1, 0, -7, -5, 0, 0}; {5, 0, 7, -1, 6, 8, 3, 3, -5, -4, 0, 0}; {-6, 5, -4, 4, -4, -5, 5, 6, -4, -1, 0, 0}; {-3, -7, 1, -6, 3, 4, -1, 0, -6, -3, 0, 0}; {6, 1, 8, 0, 8, 8, 5, 4, -7, -6, 0, 0}; {6, 1, 8, 0, 8, 8, 5, 5, 8, -7, 0, 0}; {-1, -7, -1, 6, -3, -4, -7, 8, -6, -6, 0, 0}; {5, 0, 7, -1, 7, 8, 3, 3, -4, -3, 0, 0}; {5, 0, 7, -1, 7, 8, 5, 4, 8, -7, 0, 0}; {4, -1, 6, -2, 6, 8, 3, 3, -5, -4, 0, 0}; {-6, 5, -4, 4, -3, -4, 4, 5, -3, -1, 0, 0}; {-7, 4, -5, 3, -4, -5, 4, 5, -4, -1, 0, 0}; {7, 2, -7, 1, -6, -6, 3, 4, -4, -2, 0, 0}; {-3,-7, 1, -6, 4, 6, -1, 1, -6, -3, 0, 0}; {6, 1, 8, 0, -7, -6, 3, 3, -4, -3, 0, 0}; {-2, -6, 2, -5, 5, 8, -1, 1, -5, -3, 0, 0}; {6, 1, 8, 0, -7, -5, 3, 3, -2, -3, 0, 0}; {5, 2, -5, 5, 1, 6, -5, 5, 8, -1, 0, 0}; {7, 2, -7, 1, -5, -6, 3, 4, -4, -2, 0, 0}; {-4, 8, 0, -7, 4, 4, -2, 0, -7, -3, 0, 0}; {6, 1, 8, 0, -6, -7, 2, 3, -5, -2, 0, 0}; {6, 1, 8, 0, -6, -6, 2, 3, -4, -3, 0, 0}; {4, -1, 6, -2, 8, 8, 2, 3, -5, -3, 0, 0}; {-6, 4, -6, 1, -6, -6, 7, 6, -7, -6, 0, 0}; {3, 0, -7, 3, 0, 5, -4, 4, -7, -1, 0, 0}; {2, -4, 2, -7, 3, 0, 7, 7, -1, 0, 0, 0}; {-5, 5, -5, 2, -3, 7, 7, -3, 0, 2, 0, 0}; {4, -1, 6, -2, -6, 8, 1, 2, -5, -2, 0, 0}; {3, -2, 5, -3, -6, 4, 4, -4, -2, 1, 0, 0}; {-3, 7, -3, 4, 0, -7, 8, -1, 0, 3, 0, 0}; f-2, 5, 8, -4, 6, -1, 1, -2, 5, 1, 0, 0}; {3, -1, 7, 0, 2, -4, -2, 8, -6, -5, 0, 0}; {3, -1, 7, 0, 2, -4, -2, 8, -6, -4, 0, 0}; {2, -2, 6, -1, 1, -5, -2, 8, -7, -5, 0, 0}; {2, -2, 6, -1, 1, -5, -2, 8, -7, -3, 0, 0}; {1, -6, -1, 6, 5, 0, 4, 1, -4, -4, 0, 0}; {0, -4, 4, -2, 0, -5, -5, 5, -7, -3, 0, 0}; {4, -2, 4, -4, -4, 5, 5, -2, -3, 0, 0, 0}; {-2, 7, -4, 3, 2, -6, -7, 1, -1, 1, 0, 0}; {-7, 4, -5, 4, 6, 0, -1, 8, -5, -1, 0, 0}; {-2, -6, 2, -4, -1, -6, -5, 5, 8, -4, 0, 0}; {3, -3, 3, -5, -4, 5, 4, -3, -3, 0, 0, 0}; {-2, 7, -4, 3, 3, -5, -7, 2, -1, 0, 0, 0}; {3, -3, 3, -5, -4, 5, 5, -2, -4, -1, 0, 0}; {8, 3, -6, 3, 5, -1, 0, -6, -6, -3, 0, 0}; {6, 1, 8, 1, 4, -2, -3, 7, -6, -3, 0, 0}; {0, -6, 0, 8, -6, 3, 1, -6, -3, -2, 0, 0}; {7, 2, -7, 2, 5, -1, -1, 8, -6, -2, 0, 0}; {-4, 8, 0, -6, -2, -7, -6, 4, 7, -4, 0, 0}; {7, 2, -7, 2, 5, -1, -1, -7, -6, -4, 0, 0}; {7, 2, -7, 2, 5, -1, -1, -7, -6, -3, 0, 0}; {1, -5, 1, -7, -5, 4, 3, -4, -4, -1, 0, 0}; {-4, 8, 0, -6, -2, -7, -6, 5, 8, -4, 0, 0}; {-5, 7, -1, -7, -3, 8, -6, 4, 7, -5, 0, 0}; {6, 1, 8, 1, 4, -2, -1, -7, -6, -3, 0, 0}; {-6, 3, 8, -1, 1, -7, 6, -1, -2, -1, 0, 0}; {-4, 6, -4, 4, -5, -6, 7, 6, -7, -6, 0, 0}; {-4, 6, -4, 4, -5, -6, 7, 7, -7, -6, 0, 0}; {1, -4, 3, -4, 4, 5, 3, 3, 7, 7, 0, 0}; {-6, 4, -6, 2, -6, -7, 6, 6, 8, -6, 0, 0}; {-3, 7, -3, 5, -3, -4, 6, 6, -3, -2, 0, 0}; {-7, 5, -3, 7, 1, 3, -3, -1, -7, -4, 0, 0}; {3, -2, 5, -2, 7, 8, 2, 3, -5, -3, 0, 0}; {2, -3, 4, -3, 6, 7, 3, 4, 8, -7, 0, 0}; {2, -3, 4, -3, 7, -7, 1, 2, -4, -3, 0, 0}; {4, -4, 0, 6, -3, 7, 1, -4, -5, -4, 0, 0}; {-2, 8, -2, 6, -1, -3, 6, 6, -2, -1, 0, 0}; {-2, 8, -2, 6, -1, -2, 6, 6, -2, -1, 0, 0}; {3, -2, 5, -2, 8, 8, 1, 2, -5, -3, 0, 0}; {3, -2, 5, -2, 8, 8, 1, 2, -5, -2, 0, 0}; {2, -3, 4, -3, 7, 7, 1, 2, -5, -3, 0, 0}; {-4, 6, -4, 4, -3, -4, 6, 6, -3, -2, 0, 0}; {-1, 7, -5, 1, -7, 4, -1, -5, -5, -3, 0, 0}; {-3, 7, -3, 5, -1, -4, 5, 5, -3, -1, 0, 0}; {-3, 7, -3, 5, -1, -3, 5, 5, -3, -1, 0, 0}; {1, -4, 3, -4, 7, 7, 0, 1, -6, -3, 0, 0}; {-7, 5, -3, 7, 4, 8, -2, 6, -6, 0, 0, 0}; {0, -5, 2, -5, 7, 2, 3, -6, -3, 1, 0, 0}; {-4, 6, -4, 4, -1, -4, 5, 5, -3, -1, 0, 0}; {1, -4, 3, -4, 8, 7, -1, 1, -6, -3, 0, 0}; {-7, 3, -7, 1, -2, 7, 6, -3, -1, 2, 0, 0}; {1, -7, -3, 3, -2, 7, -5, -6, 2, -1, 0, 0}; {1, -7, -3, 3, -2, 8, -5, -6, 1, 0, 0, 0}; {-5, 2, 5, -6, 4, -3, -1, -3, 4, 0, 0, 0}; {6, -1, 4, -5, 7, 2, 6, 7, -2, -1, 0, 0}; {6, -1, 4, -5, 7, 2, 6, 7, -1, -2, 0, 0}; {1, -7, -3, 3, -2, 8, -5, -5, 2, 0, 0, 0}; {0, 8, -4, 2, -2, 7, -5, -6, 1, 0, 0, 0}; {4, -3, 2, -7, 6, 0, 6, 6, -2, -2, 0, 0}; {8, 2, 8, 0, -1, -4, 0, -1, -7, -5, 0, 0}; {-6, 2, 6, -3, -6, 4, -7, 7, -1, -1, 0, 0}; {-1, 8, -3, 5, 3, -1, 3, 1, -5, -4, 0, 0}; {-7, 1, 5, -4, -7, 4, 8, 5, -2, -2, 0, 0}; {6, 3, -4, 8, -6, 5, -5, 3, 6, -4, 0, 0}; {3, -3, 3, -4, -5, 4, 4, -4, -3, 0, 0, 0}; {7, 2, -7, 3, 4, -2, 0, -7, -6, -3, 0, 0}; {0, -6, 0, -7, -7, 3, 2, -6, -3, -2, 0, 0}; {7, 2, -7, 3, 5, -1, 0, -7, -6, -4, 0, 0}; {7, 2, -7, 3, 5, -1, 0, -7, -6, -3, 0, 0}; {0, -6, 0, -7, -6, 4, 1, -6, -4, -2, 0, 0}; {0, -6, 0, -7, -6, 4, 2, -5, -3, -2, 0, 0}; {-7, 2, 7, -1, -1, 8, 5, -3, -1, -1, 0, 0}; {0, -6, 0, -7, -5, 4, 4, -3, -4, -2, 0, 0}; {-2, 8, -2, 7, -7, 3, 1, -6, -4, -2, 0, 0}; {-3, 7, -3, 6, 8, 2, 0, -7, -4, -3, 0, 0}; {-3, 7, -3, 6, 8, 2, 0, -7, -4, -2, 0, 0}; {4, -4, 0, 7, 7, -1, -5, 3, 0, 1, 0, 0}; {4, -4, 0, 7, 7, -1, -4, 4, 0, 1, 0, 0}; {7, 7, 3, 2, -6, 1, -7, 3, -5, -4, 0, 0}; {7, 0, 5, -3, -1, 8, 5, -2, -2, -1, 0, 0}; {-5, 5, -5, 4, 7, 1, 0, -7, -5, -3, 0, 0}; {5, -2, 3, -5, -2, 7, 4, -3, -3, -2, 0, 0}; {-1, -6, 1, -5, 2, 4, 0, 1, -7, -5, 0, 0}; {1, -4, 3, -3, 6, 8, 1, 2, -4, -3, 0, 0}; {7, 2, -7, 3, -4, -1, 2, -6, -4, 2, 0, 0}; {5, -3, 1, 8, -2, 8, 3, -4, -5, -3, 0, 0}; {-2, 6, -6, 1, 7, 3, -1, -3, -4, -3, 0, 0}; {1, -4, 3, -3, 6, 6, 1, 2, -6, -3, 0, 0};

{-2, -7, 0, -6, 4, 5, 0, 1, -6, -4, 0, 0}; {4, -1, 6, 0, -6, -3, 1, -7, -5, 1, 0, 0}; {8, 4, -4, 7, 2, 6, -4, 5, 8, -1, 0, 0}; {1, -7, -3, 4, -5, 5, 0, -5, -5, -4, 0, 0}; {-5, 3, 7, -2, 5, 1, -2, -4, -5, -3, 0, 0}; {6, 0, 6, -1, 8, 7, 3, 5, -6, -3, 0, 0}; {-6, 4, -6, 3, -4, -5, 5, 5, -3, -2, 0, 0}; {8, 0, 4, -5, 3, 0, -3, -5, -4, -4, 0, 0}; {0, 8, -4, 3, -5, 5, 0, -5, -4, -3, 0, 0}; {4, -3, 2, -6, 3, -2, -5, 7, -7, -5, 0, 0}; {-2, 6, -6, 1, -7, 4, -1, -6, -5, -4, 0, 0}; {-4, 4, 8, -1, 7, 2, -2, -5, -5, -4, 0, 0}; {-7, 1, 5, -4, 4, 0, -3, -5, -5, -4, 0, 0}; {-6, 4, -6, 3, -3, -5, 4, 4, -3, -1, 0, 0}; {7, -1, 3, -6, 3, -2, -4, -6, -6, -5, 0, 0}; {-7, 0, 3, -7, 3, -4, -2, -3, 4, 0, 0, 0}; {-2, 6, -6, 1, -4, 6, -7, -6, 1, 0, 0, 0}; {-3, 5, -7, 0, -5, 5, -7, 8, 0, -1, 0, 0}; {3, -4, 1, -7, 5, 0, 5, 6, -2, -2, 0, 0}; {-3, 5, -7, 0, -5, 5, -7, -7, 0, 0, 0, 0}; {-3, 5, -7, 0, -5, 5, -7, -7, 1, -1, 0, 0}; {-5, 3, 7, -2, -6, 4, 8, 8, 0, -1, 0, 0}; {-5, 3, 7, -2, -6, 5, 8, 5, -2, -3, 0, 0}; {1, -5, 1, -5, -7, 3, 3, -5, -3, -1, 0, 0}; {-2, 7, -4, 5, 2, -2, 2, 1, -5, -4, 0, 0}; {-3, -7, 1, -3, -2, -7, -3, 6, 8, -5, 0, 0}; {-6, 3, 8, 1, -1, 8, 6, -3, -1, 1, 0, 0}; {-4, 5, -6, 3, 1, -3, 2, 0, -6, -4, 0, 0}; {-3,-7, 1, -3, -2, 8, -2, 5, 7, -3, 0, 0}; {4, -1, 6, 1, 2, -4, 0, 8, -7, -3, 0, 0}; {4, -5, -2, 5, 6, 0, -6, 1, -3, 0, 0, 0}; {1, 8, -5, 2, 5, -1, 8, 1, -3, -1, 0, 0}; {-2, 7, -4, 5, -3, -5, 8, 8, -7, -6, 0, 0}; {-3, 6, -5, 4, -4, -6, 8, 7, -7, -6, 0, 0}; {6, -2, 2, -6, 2, -2, -4, -6, -6, -4, 0, 0}; {5, -3, 1, -7, 1, -3, -5, -6, -6, -5, 0, 0}; {-1, 6, -7, 0, 7, 3, 0, -3, -4, -3, 0, 0}; {1, -6, -1, 8, 2, -2, 6, 6, -2, 0, 0, 0}; {8, 4, -4, -7, -6, 5, -4, 3, 6, -4, 0, 0}; {7, 0, 5, -1, -2, -6, 4, -4, -4, -1, 0, 0}; {8, 6, 0, -1, 6, -6, 1, -7, 0, -2, 0, 0}; {0, -1, -6, -6, 2, 8, -2, 7, -2, -4, 0, 0}; {-5, -6, 5, 5, -2, 4, -4, 5, -3, -4, 0, 0}; {-4, 3, 6, -2, 1, -4, 6, -2, -5, -2, 0, 0}; {-4, 3, 6, -1, -5, 6, -2, 4, 1, 0, 0, 0}; {-6, 1, 4, -3, -7, 5, -4, 3, 0, 0, 0, 0}; {-4, 5, -6, 5, 5, -5, 2, -1, -5, -5, 0, 0}; {-1, 5, 7, -1, -4, 7, -2, 4, 0, 1, 0, 0}; {1, -5, 1, -3, -1, 5, -3, -5, 8, -7, 0, 0}; {-1, -6, 1, -2, 2, -4, 2, 5, 7, 6, 0, 0}; {1, -4, 3, 0, 6, -2, 3, 7, 6, 6, 0, 0}; {-3, 3, 5, -2, -6, 6, -3, 3, 0, 2, 0, 0}; {-3, 4, 8, 2, -5, -6, 0, 0, 4, 0, 0, 0}; {-3, 5, -6, 5, 1, -1, 7, -3, -2, -1, 0, 0}; {6, -3, 1, -5, 6, 3, -6, 1, -1, -1, 0, 0}; {0, -7, -1, -5, -7, 7, 0, 8, -6, -3, 0, 0}; {-2, 5, -7, 4, -3, -6, 0, 1, 4, 2, 0, 0}; {-6, 2, 7, 3, -1, -3, 5, -4, -3, -1, 0, 0}; {-4, 8, 1, 2, -7, -7, -1, 6, -1, 1, 0, 0}; {0, -4, 5, 6, -2, 8, -2, 1, 3, -2, 0, 0}; {-1, 1, 0, 8, -4, -5, 3, -4, -2, 6, 0, 0}; {3, 7, 8, 2, -7, 5, -2, 7, -7, 3, 0, 0}; {5, 3, -2, 2, -5, -3, 4, -3, -7, -3, 0, 0}; {-1, -4, 6, -7, 1, 2, -7, 1, -4, -1, 0, 0}; {-2, -3, -7, -1, -1, -5, 1, 8, 5, -6, 0, 0}; {1, 1, -2, 5, 8, 4, -5, 2, 1, 8, 0, 0}; {-7, 8, 4, -6, 4, 7, -1, 8, 7, -5, 0, 0}; {1, -1, -6, -1, 8, -5, 2, -6, -7, -3, 0, 0}; {1, -1, -6, -1, 8, -5, 2, -5, -7, -2, 0, 0}; {-3, 8, 0, 4, 0, 6, 8, -1, 2, 4, 0, 0}; {-1, -5, 4, -6, 7, -2, 2, -6, -1, 2, 0, 0}; {-3, 8, 0, 5, 1, 8, 8, -1, 2, 5, 0, 0}; {-7, 4, -4, 1, -3, 4, 6, -3, 1, 3, 0, 0}; {2, -4, 3, 7, 2, -6, -6, 0, 3, 4, 0, 0}; {8, 3, -5, 0, -3, 3, 5, -4, 1, 3, 0, 0}; {-3, -7, 2, 8, 6, -3, 1, -7, -2, 1, 0, 0}; {-1, -7, 0, 4, 0, 7, 8, -1, 3, 3, 0, 0}; {1, -3, 6, -3, 1, -5, -4, 8, -6, -5, 0, 0}; {6, 1, -7, -1, -4, 5, 5, -2, -1, 2, 0, 0}; {-1, -7, 0, 5, 1,-6,-7,-1, 1, 4, 0, 0}; {7, 4, -2, 6, -6, 5, 8, 5, 7, -6, 0, 0}; {5, 2, -4, 4, 8, 3, 7, 5, 6, -6, 0, 0}; {0, -4, 5, -3, 0, -6, -4, 8, -7, -4, 0, 0}; {0, -4, 5, -3, 0, -6, -4, 8, -7, -5, 0, 0}; {-1, -5, 4, -4, 0, -6, -4, 7, -7, -5, 0, 0}; {-1, -5, 4, -4, 0, -6, -4, 7, -7, -4, 0, 0}; {-7, 4, -4, 3, 6, -1, 0, -5, -5, -3, 0, 0}; {5, 0, 8, -1, 2, -5, -2, -6, -7, -3, 0, 0}; {-4, 8, 1, -7, -2, 8, -7, 5, 8, -5, 0, 0}; {-3, -7, 2, -6, 2, 1, 3, -7, -2, 2, 0, 0}; {7, 2, -6, 1, 8, 8, 4, 4, -4, -2, 0, 0}; {1, -5, 2, 8, -2, -2, 8, 7,

-1, -1, 0, 0}; {-5, 7, 0, 8, 0, 2, -1, 0, -7, -5, 0, 0}; {7, 2, -6, 1, -7, -6, 3, 3, -3, -2, 0, 0}; {6, 1, -7, 0, 8, -7, 4, 4, -4, -3, 0, 0}; {5, 0, 8, -1, 7, 8, 3, 3, -4, -3, 0, 0}; {-6, 6, -1, 7, 0, 2, -1, 0, -7, -5, 0, 0}; {4, -1, 7, -2, 6, 7, 5, 4, 8, -7, 0, 0}; {5, 0, 8, -1, 7, -7, 3, 3, -4, -3, 0, 0}; {-4, 8, 1, -7, 3, 4, -2, -1, -6, -3, 0, 0}; {3, -2, 6, -3, 6, 6, 2, 3, -5, -3, 0, 0}; {-7, 5, -2, 6, 0, 2, -2, 0, 8, -5, 0, 0}; {3, -2, 6, -3, 7, -6, 1, 2, -4, -4, 0, 0}; {4, -1, 7, -2, 8, 8, 2, 3, -5, -3, 0, 0}; {3, -2, 6, -3, 7, -7, 1, 2, -4, -4, 0, 0}; {2, -3, 5, -4, 6, 8, 1, 2, -5, -4, 0, 0}; {3, -2, 6, -3, -7, 7, 0, 1, -6, -2, 0, 0}; {3, -2, 6, -3, -6, 4, 4, -4, -2, 1, 0, 0}; {2, -3, 5, -4, -7, 3, 3, -4, -2, 1, 0, 0}; {0, -5, 3, -6, 8, 2, 3, -5, -3, 1, 0, 0}; {-1, -5, 4, -3, -1, -6, -5, 6, -7, -4, 0, 0}; {3, -3, 4, -5, -5, 4, 4, -2, -3, 0, 0, 0}; {3, -3, 4, -5, -4, 5, 3, -3, -2, -3, 0, 0}; {8, 3, -5, 3, 5, -1, -1, -6, -5, -4, 0, 0}; {8, 3, -5, 3, 5, -1, -1, -6, -5, -3, 0, 0}; {-3, -7, 2, -5, -2, -7, -6, 6, 8, -5, 0, 0}; {-3, 6, -4, 2, 2, -6, -7, 2, -1, 1, 0, 0}; {7, 2, -6, 2, 4, -2, -1, -6, -6, -3, 0, 0}; {-4, 8, 1, -6, -3, 8, -6, 6, 8, -5, 0, 0}; {-4, 8, 1, -6, -3, 8, -6, 6, 8, -4, 0, 0}; {1, -5, 2, -7, -6, 3, 3, -2, -4, -1, 0, 0}; {6, 1, -7, 1, 3, -3, -1, -6, -6, -4, 0, 0}; {-1, -5, 4, -3, 0, -6, -3, 7, -7, -5, 0, 0}; {-1, -5, 4, -3, 0, -6, -3, 7, -7, -4, 0, 0}; {-3, -7, 2, -5, -1, -6, -7, 4, -7, -3, 0, 0}; {-5, 7, 0, -7, -3, 8, 8, 4, 8, -4, 0, 0}; {-5, 7, 0, -7, -3, 8, -7, 5, 8, -4, 0, 0}; {4, -1, 7, -1, 5, 7, 3, 3, -5, -3, 0, 0}; {5, 0, 8, 0, 8, 8, 3, 4, -5, -2, 0, 0}; {-2, 8, -1, 6, -3, -3, 7, 7, -2, -2, 0, 0}; {-1, -6, 2, -6, 2, 4, 2, 2, 6, 7, 0, 0}; {-2, -7, 1, -7, 1, 3, 2, 2, 6, 7, 0, 0}; {0, -5, 3, -5, 3, 5, 1, 1, -5, -4, 0, 0}; {6, 1, -7, 1, -7, -4, 3, 4, -2, -2, 0, 0}; {-6, 4, -5, 2, -6, -7, 6, 6, 8, -7, 0, 0}; {3, -3, 4, -5, 3, 2, 8, -7, 0, 1, 0, 0}; {5, 0, 8, 0, -7, -7, 2, 3, -4, -2, 0, 0}; {-2, 8, -1, 6, -2, -3, 6, 6, -2, -1, 0, 0}; {-3, 7, -2, 5, -3, -4, 6, 6, -3, -2, 0, 0}; {-4, 6, -3, 4, -4, -5, 6, 6, -3, -2, 0, 0}; {8, 2, -7, 0, 8, 8, 6, 5, 8, -7, 0, 0}; {-2, 8, -1, 6, -2, -2, 7, 7, -2, -2, 0, 0}; {3, -2, 6, -2, 7, 8, 2, 3, -5, -3, 0, 0}; {2, -3, 5, -3, 6, 7, 1, 2, -5, -3, 0, 0}; {2, -3, 5, -3, 6, 7, 2, 3, -6, -4, 0, 0}; {1, -4, 4, -4, 5, 7, 1, 2, -5, -4, 0, 0}; {0, -5, 3, -5, 4, 6, 1, 2, -6, -5, 0, 0}; {8, 2, -7, 0, -7, -6, 6, 5, -6, -6, 0, 0}; {0, -5, 3, -5, 5, 7, 0, 1, -5, -4, 0, 0}; {0, -5, 3, -5, 5, 7, 1, 2, -5, -4, 0, 0}; {3, -2, 6, -2, 8, 8, 1, 2, -5, -2, 0, 0}; {5, 0, 8, 0, -6, -5, 2, 4, -4, -1, 0, 0}; {-5, 5, -4, 3, -4, -4, 5, 5, -3, -2, 0, 0}; {-2, 6, -5, 0, 8, 3, -2, -5, -5, -4, 0, 0}; {-3, 7, -2, 5, -1, -3, 5, 5, -3, -1, 0, 0}; {1, -4, 4, -4, 7, 7, 0, 2, -6, -3, 0, 0}; {-6, 4, -5, 2, -3, 8, 7, -2, 0, 3, 0, 0}; {-5, 2, 6, -6, 4, -3, 0, -2, 5, 1, 0, 0}; {5, -1, 6, -3, -4, 5, 4, -3, -2, 1, 0, 0}; {8, 0, 5, -5, 8, 4, 7, 4, -3, -4, 0, 0}; {4, -2, 5, -3, -4, 5, 5, -3, -2, 0, 0, 0}; {2, -4, 3, -5, -6, 3, 3, -4, -3, 0, 0, 0}; {8, 3, -5, 4, 4, -2, 0, -7, -5, -2, 0, 0}; {-4, 8, 1, -5, -3, 8, -6, 5, 8, -4, 0, 0}; {6, 1, -7, 2, 3, -3, -1, -7, -6, -2, 0, 0}; {6, 1, -7, 2, 3, -2, -3, 8, -5, -2, 0, 0}; {-1, -5, 4, -2, 0, -6, -2, 7, -7, -5, 0, 0}; {-1, -5, 4, -2, 0, -6, -2, 7, -7, -4, 0, 0}; {6, 1, -7, 2, 4, -2, -1, 8, -5, -3, 0, 0}; {1, -5, 2, -6, -5, 4, 4, -3, -3, -2, 0, 0}; {5, 0, 8, 1, 3, -3, -2, 8, -6, -3, 0, 0}; {-5, 4, -6, 1, 1, -7, 8, 1, -1, 0, 0, 0}; {4, -1, 7, 0, 2, -4, -2, 8, -7, -3, 0, 0}; {6, 1, -7, 2, 4, -1, -3, 7, -5, -2, 0, 0}; {-6, 6, -1, -7, -4, 8, 8, 4, 8, -4, 0, 0}; {4, -1, 7, 0, 3, -3, -4, 7, -7, -3, 0, 0}; {-1, -7, 0, 8, -6, 3, 2, -5, -3, -2, 0, 0}; {4, -1, 7, 0, 3, -3, -2, 8, -6, -4, 0, 0}; {4, -1, 7, 0, 3, -3, -2, 8, -6, -3, 0, 0}; {3, -2, 6, -1, 2, -4, -3, 7, -7, -3, 0, 0}; {-2, 8, -1, 7, -7, 2, 2, -4, -4, -2, 0, 0}; f 4, -1, 7, 0, 3, -2, -4, 7, -5, -2, 0, 0}; {2, -3, 5, -2, 1, -4, -5, 6, -6, -3, 0, 0}; {1, -4, 4, -3, 1, -5, -5, 6, -7, -4, 0, 0}; {-5, 5, -4, 4, -6, -6, 5, 5, -3, -3, 0, 0}; {-3, 7, -2, 6, -3, -4, 6, 6, -2, -1, 0, 0}; {-7, 3, -6, 2, -7, -7, 6, 5, -7, -7, 0, 0}; {-7, 3, -6, 2, -7, -7, 6, 5, -6, -6, 0, 0}; {8, 2, -7, 1, 8, 8, 6, 5, 8, -7, 0, 0}; {-7, 3, -6, 2, -7, -7, 7, 6, 8, -7, 0, 0}; {-6, 4, -5, 3, -6, -6, 5, 5, -3, -2, 0, 0}; {8, 2, -7, 1, 8, -7, 6, 5, -7, -7, 0, 0}; {-4, 7, -1, 8, 0, 2, 1, 1, 6, 7, 0, 0}; {1, -4, 4, -3, 5, 7, 1, 2, -5, -3, 0, 0}; {-1, -7, 0, 8, 0, 1, 7, 8, 0, 0, 0, 0}; {-3, 7, -2, 6, -2, -3, 6, 6, -2, -1, 0, 0}; {7, 0, 6, -3, 4, 2, -6, -7, 1, 0, 0, 0}; {-5, 5, -4, 4, -4, -5, 5, 5, -3, -2, 0, 0}; {-7, 3, -6, 2, -6, -6, 6, 6, -7, -7, 0, 0}; {7, 1, 8, 0, 8, 8, 4, 4, -4, -3, 0, 0}; {7, 1, 8, 0, 8, 8, 5, 5, 8, -7, 0, 0}; {-5, 5, -4, 4, -4, -4, 5, 5, -2, -2, 0, 0}; {-5, 5, -4, 4, -4, -4, 5, 5, -2, -1, 0, 0}; 0, -5, 3, -4, 5, 6, 0, 1, -5, -3, 0, 0}; {-7, 3, -6, 2, -5, -5, 5, 6, -4, -2, 0, 0}; {7, 1, 8, 0, -7, -7, 4, 5, -5, -3, 0, 0}; {7, 1, 8, 0, -7, -7, 5, 5, -7, -7, 0, 0}; {6, 0, 7, -1, 8, 8, 4, 4, -4, -3, 0, 0}; {7, 0, 6, -3, 5, 4, -6, -7, 2, 0, 0, 0}; {-6, 4, -5, 3, -4, -4, 5, 5, -3, -2, 0, 0}; {-2, -7, 1, -6, 4, 5, -1, 0, -5, -3, 0, 0}; {5, -1, 6, -2, 7, 8, 5, 4, -7, -7, 0, 0}; {-2, -7, 1, -6, 4, 2, 2, -6, -2, 2, 0, 0}; {-6, 4, -5, 3, -4, -5, 4, 4, -3, -2, 0, 0}; {-6, 4, -5, 3, -4, -5, 5, 5, -3, -2, 0, 0}; {-1, -6, 2, -5, 5, 5, 0, 1, -6, -3, 0, 0}; {7, 1, 8, 0, -6, -6, 4, 4, -4, -3, 0, 0}; {7, 1, 8, 0, -6, -5, 3, 3, -3, -3, 0, 0}; {5, -2, 4, -5, 5, 2, 8, 8, 0, 0, 0, 0}; {7, 1, 8, 0, -5, -6, 3, 3, -4, -2, 0, 0}; {6, 0, 7, -1, -6, 5, 5, -4, -1, 2, 0, 0}; {-4, 4, -7, -1, -5, 4, -7, -7, 0, -1, 0, 0}; {-5, 3, 8, -2, -6, 4, -7, 8, 0, -1, 0, 0}; {-7, 1, 6, -4, 8, 4, 7, 4, -3, -4, 0, 0}; {1, -5, 2, -5, -7, 3, 3, -4, -3, -1, 0, 0}; {-6, 1, 5, -5, 6, -3, -5, 2, 3, 2, 0, 0}; {4, -5, -1, 5, 0, -7, -4, -5, 2, 0, 0, 0}; {-6, 3, -7, 1, -1, 8, 7, -1, -1, 1, 0, 0}; {4, -4, 1, 8, 5, -3, -5, 2, 1, 2, 0, 0}; {-3, -7, 2, -3, -1, -7, -2, 6, 8, -4, 0, 0}; {5, 0, 8, 2, 3, -3, 0, -7, -6, -4, 0, 0}; {5, 0, 8, 2, 3, -3, 0, -7, -6, -3, 0, 0}; {4, -1, 7, 1, 2, -3, -3, 7, -6, -3, 0, 0}; {3, -5, 0, 7, 5, -3, -6, 2, 1, 1, 0, 0}; {3, -5, 0, 7, 5, -3, -6, 2, 1, 2, 0, 0}; {0, 7, -5, 1, -2, 8, -5, 8, 0, -1, 0, 0}; {4, -1, 7, 1, 3, -3, -1, 8, -6, -4, 0, 0}; f 4, -1, 7, 1, 3, -3, -1, 8, -6, -3, 0, 0}; {-7, 5, -2, -7, -4, 7, -5, 4, 7, -4, 0, 0}; {2, -3, 5, -1, 1, -5, -2, 8, -7, -4, 0, 0}; {2, -3, 5, -1, 1, -5, -2, 8, -7, -3, 0, 0}; {1, -4, 4, -2, 0, -6, -3, 8, -7, -4, 0, 0}; {1, 8, -4, 2, 0, 7, 2, 8, 5, 2, 0, 0}; {4, -4, 1, 8, 7, -1, -5, 3, 1, 0, 0, 0}; {-3, 7, -2, 7, 8, 2, 0, -6, -4, -3, 0, 0}; {-4, 6, -3, 6, 7, 1, 0, -7, -4, -2, 0, 0}; {8, 1, 7, -1, -1, 8, 6, -2, -1, 0, 0, 0}; {3, -5, 0, 7, 6, -2, -5, 3, 1, 1, 0, 0}; {8, 1, 7, -1, -1, 8, 6, -1, -2, -1, 0, 0}; {2, -6, -1, 6, 5, -3, -5, 3, 0, 1, 0, 0}; {1, -4, 4, -2, 0, -5, -3, 7, -7, -4, 0, 0}; {-5, 5, -4, 5, 7, 1, -1, -7, -5, -3, 0, 0}; {-5, 5, -4, 5, 7, 1, -1, -7, -5, -2, 0, 0}; {-4, 6, -3, 6, 8, 2, 0, -6, -5, -3, 0, 0}; {1, -4, 4, -2, 1, -4, -4, 5, -7, -3, 0, 0}; {-4, 6, -3, 6, 8, 2, 1, -5, -4, -3, 0, 0}; {6, -1, 5, -3, -2, 7, 5, -2, -2, -1, 0, 0}; {6, -1, 5, -3, -2, 7, 5, -2, -2, 0, 0, 0}; {6, -1, 5, -3, -2, 7, 5, -2, -3, -1, 0, 0}; {0, -5, 3, -3, 0, -5, -4, 6, 8, -4, 0, 0}; {5, -2, 4, -4, -3, 6, 5, -2, -3, -1, 0, 0}; {5, -2, 4, -4, -3, 6, 5, -2, -3, 0, 0, 0}; {6, -1, 5, -3, -2, 7, 6, -1, -3, -1, 0, 0}; {5, -2, 4, -4, -2, 7, 4, -2, -3, -2, 0, 0}; {-6, 4, -5, 4, 7, 1, 0, -6, -5, -3, 0, 0}; f 4, -3, 3, -5, -3, 6, 4, -3, -3, -2, 0, 0}; {-6, 4, -5, 4, 7, 1, 0, -6, -5, -2, 0, 0}; {4, -3, 3, -5, -3, 6, 4, -3, -3, -1, 0, 0}; {-7, 3, -6, 3, 6, 0, -1, -7, -5, -3, 0, 0}; {-1, -6, 2, -4, 0, -5, -5, 6, -7, -3, 0, 0}; {-7, 3, -6, 3, 6, 0, -1, -7, -5, -2, 0, 0}; {-3, 8, 0, -6, 1, 3, -1, 0, -7, -5, 0, 0}; {5, -1, 6, -1, 6, 7, 3, 3, -5, -4, 0, 0}; {5, -1, 6, -1, 6, 7, 4, 4, -7, -7, 0, 0}; {6, 0, 7, 0, 7, 7, 3, 4, -5, -3, 0, 0}; {7, 1, 8, 1, -7, -7, 4, 4, -4, -3, 0, 0}; {8, 2, -7, 2, -6, -5, 4, 4, -2, -2, 0, 0}; {6, 0, 7, 0, 8, -7, 3, 3, -3, -3, 0, 0}; {-2, 7, -3, 5, -3, -4, 7, 7, -3, -2, 0, 0}; {2, -4, 3, -4, 5, 5, 2, 3, -6, -4, 0, 0}; {-2, 7, -3, 5, -2, -4, 7, 7, -3, -2, 0, 0}; {5, -3, 2, -7, 2, -2, -5, -7, -6, -5, 0, 0}; {4, -2, 5, -2, -7, 5, 4, -4, -1, 2, 0, 0}; {-4, 5, -5, 3, -2, 8, 7, -3, -1, 2, 0, 0}; {-7, 1, 6, -3, 8, 3, -7, 8, 0, 0, 0, 0}; {-3, 6, -4, 4, 0, 3, 3, 1, 6, 7, 0, 0}; {8, 3, -5, 5, 3, -2, 0, 8, -5, -1, 0, 0}; {-6, 3, -7, 2, -2, 8, 7, -3, -1, 2, 0, 0}; {4, -1, 7, 2, 1, -4, -2, 7, -6, -2, 0, 0}; {2, -6, -1, 7, 3, -4, -6, 1, 1, 2, 0, 0}; {2, -6, -1, 7, 4, -3, -6, 2, 1, 1, 0, 0}; {-4, 6, -3, 7, 7, 1, 1, -6, -4, -3, 0, 0}; {-5, 5, -4, 6, 6, 0, 2, -5, -5, -3, 0, 0}; {5, -2, 4, -3, -4, 6, 4, -4, -2, -1, 0, 0}; {5, -2, 4, -3, -4, 6, 4, -4, -2, 0, 0, 0}; {8, 1, 7, 0, -1, -5, 0, -2, -7, -5, 0, 0}; {-1, -6, 2, -3, -1, -6, -3, 6, 8, -4, 0, 0}; {-7, 3, -6, 4, 5, -1, 1, -6, -6, -2, 0, 0}; {-6, 4, -5, 5, 6, 1, -1, 8, -5, -3, 0, 0}; {-6, 4, -5, 5, 6, 1, -1, 8, -5, -2, 0, 0}; {-4, 3, 7, -2, -4, 4, -1, 6, 3, 2, 0, 0}; {4, -3, 3, -4, -4, 6, 4, -4, -3, 0, 0, 0}; {-7, 3, -6, 4, 5, 0, -1, 8, -5, -3, 0, 0}; {-2,-7, 1, -4, -1, -6, -5, 5, 8, -4, 0, 0}; {4, -3, 3, -4, -3, 6, 5, -2, -3, -1, 0, 0}; {8, 2, -7, 3, 5, -1, 0, -7, -6, -2, 0, 0}; {-6, 1, 5, -4, -5, 3, -2, 5, 2, 1, 0, 0}; {-1, 7, -4, 4, 4, -3, -7, 1, 0, -1, 0, 0}; {2, -5, 1, -6, -5, 5, 2, -5, -3, -2, 0, 0}; {8, 2, -7, 3, 5, 0, -1, 8, -6, -2, 0, 0}; {2, -5, 1, -6, -5, 5, 3, -5, -3, -1, 0, 0}; {2, -5, 1, -6, -5, 5, 3, -4, -3, -1, 0, 0}; {8, 2, -7, 3, 6, 0, -1, 8, -5, -2, 0, 0}; {2, -5, 1, -6, -4, 5, 4, -3, -3, -1, 0, 0}; {6, 0, 7, 1, 4, -2, -2, 8, -6, -3, 0, 0}; {-3, 5, -6, 2, 3, -4, 8, 1, -1, -1, 0, 0}; {-5, -6, 6, 5, -3, 4, -4, 5, -4, -4, 0, 0}; {1, -5, 2, -4, 4, 5, 1, 2, -6, -4, 0, 0}; {-7, 2, 8, 1, -7, 8, 6, 6, 8, -7, 0, 0}; {3, -3, 4, -2, 8, 7, 0, 1, -5, -2, 0, 0}; {3, -5, 0, 8, 1, -2, 4, 4, 6, 5, 0, 0}; {3, -3, 4, -2, -6, -4, 2, -7, -4, 0, 0, 0}; {1, -4, 4, 0, 0, -5, -2, 7, -7, -4, 0, 0}; {4, -3, 3, -3, -5, 5, 4, -4, -2, -1, 0, 0}; {1, -7, -2, 7, 4, -1, 3, 1, -4, -4, 0, 0}; {-2, -7, 1, -3, -2, -7, -3, 6, 8, -4, 0, 0}; {-2, 6, -5, 4, 3, -2, 3, 0, -5, -4, 0, 0}; {-1, 8, -2, 8, -7, 3, 1, -6, -3, -2, 0, 0}; {-7, 8, 4, 4, -4, 2, -6, 4, -4, -4, 0, 0}; {4, -2, 5, 0, 5, 5, 8, -5, 4, 5, 0, 0}; {1, -5, 2, -3, 6, 6, 1, 2, -5, -2, 0, 0}; {-1, -7, 0, -5, 4, 4, 0, 1, -6, -3, 0, 0}; {-1, -7, 0, -5, 4, 5, 0, 1, -5, -3, 0, 0}; {-1, 8, -2, 8, 2, 3, -7, -3, 0, 1, 0, 0}; {-5, 4, -6, 5, 0, 0, 7, -5, -1, -1, 0, 0}; {3, -5, 0, -6, 4, 5, -5, -2, 1, 0, 0, 0}; {-2, 5, -6, 3, -5, -6, 0, 0, 4, 2, 0, 0}; {6, -2, 4, -2, 8, 6, -3, -1, 2, 2, 0, 0}; {-6, 3, -6, 5, 0, 0, 7, -5, -1, 0, 0, 0}; {4, -4, 2, -4, 6, 5, -5, -2, 1, 2, 0, 0}; {2, -6, 0, -6, 4, 4, -6, -2, 0, 1, 0, 0}; {1, 8, -3, 6, 0, -4, 2, 3, 5, 4, 0, 0}; {-6, 1, 6, -1, -7, 8, -2, 1, 3, 2, 0, 0}; {3, 8, -5, 2, -5, 1, -2, 5, 4, 2, 0, 0}; {-1, 7, -3, 7, 7, -5, 3, 0, -4, -5, 0, 0}; {4, -3, 4, -1, 1, 6, -2, -3, -6, -6, 0, 0}; {7, 0, 7, 2, 7, 7, -7, -4, 4, 5, 0, 0}; {-7, 1, 7, 1, 6, 7, -3, -3, 4, 3, 0, 0}; {-7, 1, 7, 1, 8, 8, -3, -3, 4, 3, 0, 0}; {7, -1, 5, -1, 6, 7, -3, -3, 3, 2, 0, 0}; {-3, 5, -5, 6, -3, -7, 8, -5, -7, 7, 0, 0}; {-1, 6, -5, 5, -2, -5, 1, 2, 4, 3, 0, 0}; {-2, 5, -6, 4, -3, -6, 0, 1, 4, 3, 0, 0}; {3, -7, -3, 6, -2, -3, 3, 2, 5, 1, 0, 0}; {3, -7, -3, 6, -2, -3, 3, 2, 5, 2, 0, 0}; {-7, 0, 5, -1, -7, 7, -3, 1, 2, 2, 0, 0}; {-2, 6, -4, 7, 2, 1, 8, -3, -1, 0, 0, 0}; {2, 8, -4, 5, -2, -4, 1, 3, 4, 3, 0, 0}; {3, -6, -1, -7, 6, -1, 3, 1, -2, -4, 0, 0}; {0, -7, 0, -4, -2, 4, -4, -5, 8, -7, 0, 0}; {5, -5, -1, -7, 1, -3, 3, 3, 5, 4, 0, 0}; {6, -3, 2, -3, 7, 5, -4, -1, 2, 0, 0, 0}; {-5, 3, -7, 5, 0, -1, 7, -5, -1, -2, 0, 0}; {-3, -7, 3, 4, -3, 7, -3, -1, 3, -2, 0, 0}; {6, 1, -6, -6, 3, -5, 1, 4, 5, -1, 0, 0}; {4, -1, 8, -7, 1, -5, 0, 1, 5, -1, 0, 0}; {-7, -4, -3, 6, -3, 8, 1, -7, -6, 5, 0, 0}; {7, -6, -5, 4, -5, 7, 0, 8, -6, 4, 0, 0}; {0, -2, -6, -1, 8, -6, 2, -5, 8, -4, 0, 0}; {3,-2, 7, -7, 0, -6, -1, 2, 3, -2, 0, 0}; {-5, -4, -5, 3, 7, 1, -7, 0, -1, 8, 0, 0}; {0, 2, 2, -5, 1, -5, 4, -4, -4, 6, 0, 0}; {6, 5, 2, -7, 2, 6, -2, 6, 6, -6, 0, 0}; {5, 2, -3, 2, -5, -3, 4, -4, -6, -4, 0, 0}; {5, 2, -3, 2, -5, -3, 4, -4, -6, -3, 0, 0}; {-5, 3, -7, -7, 2, 4, -5, 8, -2, 0, 0, 0}; {-7, 8, 5, -4, 4, 8, -1, 8, 6, -4, 0, 0}; {1, -2, -7, -1, 8, -5, 2, -6, -6, -4, 0, 0}; {2, -1, -6, 2, 7, 2, 5, 3, 6, -6, 0, 0}; {-4, 8, 2, -7, -3, 7, -6, 7, 8, -5, 0, 0}; {-4, 8, 2, -7, -3, 7, -6, 7, 8, -4, 0, 0}; {0, -3, 8, 0, 5, 0, 4, 3, 5, -7, 0, 0}; {2, -4, 4, -7, 1, 3, 8, 7, 1, -1, 0, 0}; {0, -3, 8, 1, 5, 1, 4, 3, 5, -6, 0, 0}; {-6, 6, 0, 8, -5, 6, -7, 6, 7, -4, 0, 0}; {-5, 7, 1, -7, -3, 7, -7, 6, 8, -6, 0, 0}; {5, 0, -7, 0, 3, -3, -3, -6, -5, -5, 0, 0}; {-6, 6, 0, 8, -4, 7, -7, 6, 8, -6, 0, 0}; {4, -1, 8, -1, 2, -4, -3, -6, -6, -5, 0, 0}; {-3, 7, -1, 5, 7, 0, 1, -3, -5, -1, 0, 0}; {-1, -6, 3, -6, -3, 7, -5, -7, 8, -6, 0, 0}; {3, -3, 5, -5, -2, 6, 4, -3, -1, -1, 0, 0}; {3, -2, 7, -2, 2, -4, -4, -7, -6, -5, 0, 0}; {-2, -6, 4, -4, 3, 2, 3, -6, -2, 2, 0, 0}; {7, 2, -5, 2, 8, 7, 7, -2, 0, 4, 0, 0}; {7, 2, -5, 2, -7, 6, 7, -3, 1, 4, 0, 0}; {-5, 7, 1, -7, 1, 1, 2, -7, -3, 2, 0, 0}; {-4, 6, -2, 4, -6, -5, 6, 5, -2, -2, 0, 0}; {5, 0, -7, 0, 8, 5, 5, -4, -1, 2, 0, 0}; {2, -3, 6, -3, 5, 7, 1, 1, -4, -3, 0, 0}; {0, -5, 4, -5, 4, 5, 1, 2, -6, -4, 0, 0}; {-7, 3, -5, 1, -5, -4, 4, 4, -3, -3, 0, 0}; {-7, 3, -5, 1, -4, -5, 3, 4, -4, -2, 0, 0}; {-3, 8, 1, 8, 4, 5, -2, 0, -7, -4, 0, 0}; {4, -1, 8, -1, -5, -2, 0, -2, 4, 6, 0, 0}; {-5, 5, -3, 3, -2, 7, 7, -1, 2, 4, 0, 0}; {-6, 4, -4, 2, -2, -5, 3, 4, -4, -1, 0, 0}; {7, 2, -5, 3, 3, -3, -2, -7, -5, -1, 0, 0}; {-1, -7, 1, 8, 8, 1, 2, -3, -3, -3, 0, 0}; {1, -5, 3, -6, -5, 4, 3, -3, -2, -3, 0, 0}; {5, 0, -7, 1, 3, -3, -2, -7, -5, -4, 0, 0}; {4, -1, 8, 0, 2, -4, -2, -7, -6, -4, 0, 0}; {4, -1, 8, 0, 2, -4, -2, -7, -6, -3, 0, 0}; {3,-2, 7, -1, 1, -5, -3, -7, -7, -4, 0, 0}; {3, -2, 7, -1, 1, -5, -3, -7, -7, -3, 0, 0}; {3, -2, 7, -1, 1, -5, -3, -7, -6, -5, 0, 0}; {3, -2, 7, -1, 1, -5, -3, -7, -6, -4, 0, 0}; {3, -2, 7, -1, 2, -4, -3, -7, -6, -4, 0, 0}; {-3, 7, -1, 6, 8, 1, 1, -4, -4, -1, 0, 0}; {2, -3, 6, -2, 1, -5, -3, 8, -7, -3, 0, 0}; {1, -4, 5, -3, 0, -6, -4, 8, -7, -5, 0, 0}; {1, -4, 5, -3, 0, -6, -4, 8, -7, -4, 0, 0}; {-4, 6, -2, 5, 7, 0, 1, -4, -5, -2, 0, 0}; {6, -1, 6, -4, -3, 5, 5, 0, -3, 0, 0, 0}; {8, 2, -6, 1, 3, -4, -1, -4, -6, -4, 0, 0}; {7, 2, -5, 3, -7, 7, 7, -3, 1, 4, 0, 0}; {4, -1, 8, 0, 7, 5, 5, -4, -1, 3, 0, 0}; {-2, 8, 0, 7, -3, -4, 7, 7, -2, -1, 0, 0}; {3, -2, 7, -1, 6, 6, 2, 3, -5, -2, 0, 0}; {3, -2, 7, -1, 6, 6, 3, 3, -5, -3, 0, 0}; {-4, 6, -2, 5, -5, -5, 6, 5, -2, -2, 0, 0}; {2, -3, 6, -2, 5, 6, 2, 3, -5, -3, 0, 0}; {0, -5, 4, -4, 3, 4, 1, 1, -6, -4, 0, 0}; {1, -4, 5, -3, 4, 6, 2, 3, -5, -3, 0, 0}; {-4, 6, -2, 5, -4, -5, 5, 5, -2, -1, 0, 0}; {1, -4, 5, -3, 5, 5, 1, 1, -5, -3, 0, 0}; {5, -2, 5, -5, 1, 0, -6, -7, 0, -1, 0, 0}; {-6, 4, -4, 3, -6, -5, 6, 6, -3, -3, 0, 0}; {-1, -6, 3, -5, 3, 5, 1, 2, -6, -4, 0, 0}; {8, 2, -6, 1, -7, -6, 5, 5, -4, -3, 0, 0}; {7, 1, -7, 0, 8, -7, 4, 4, -4, -3, 0, 0}; {-7, 3, -5, 2, -6, -5, 4, 3, -2, -2, 0, 0}; {-6, 4, -4, 3, -5, -5, 5, 5, -3, -2, 0, 0}; {8, 2, -6, 1, -6, -6, 4, 4, -4, -3, 0, 0}; {8, 2, -6, 1, -6, -6, 5, 5, -4, -3, 0, 0}; {8, 1, 8, -2, 6, 5, -6, -6, 2, 1, 0, 0}; {-7, 3, -5, 2, -5, -5, 4, 4, -3, -2, 0, 0}; {6, 0, 8, -1, 8, -7, 3, 3, -4, -3, 0, 0}; {-5, 5, -3, 4, -3, -1, 5, 6, -1, -1, 0, 0}; {0, -5, 4, -4, 6, -7, 0, 2, -4, -2, 0, 0}; {5, -2, 5, -5, 4, 2, -7, -7, 0, 0, 0, 0}; {-7, 3, -5, 2, -4, -4, 4, 5, -3, -2, 0, 0}; {-2, -7, 2, -6, 5, 6, -1, 1, -6, -3, 0, 0}; {8, 2, -6, 1, -5, -5, 3, 4, -3, -2, 0, 0}; {7, 0, 7, -3, 6, 7, 7, 3, -2, -4, 0, 0}; {-3, 7, -1, 6, 0, 3, 4, 1, 6, 7, 0, 0}; {2, -5, 2, 8, 2, 0, 7, 7, -1, -1, 0, 0}; {6, 2, -4, 5, 2, 6, -3, 5, -6, -1, 0, 0};

{0, -7, 0, 6, 1, -2, 6, 6, -2, -1, 0, 0}; {4, -2, 6, -3, -6, 4, 4, -4, -2, 1, 0, 0}; {0, -6, 2, -6, 8, 2, 2, -5, -3, 0, 0, 0}; {0, -6, 2, -6, 8, 2, 2, -4, -3, 0, 0, 0}; {-7, 4, -3, 6, 6, -1, 3, -6, -4, -1, 0, 0}; {2, -3, 6, -1, 0, -5, -4, 7, -6, -3, 0, 0}; {2, -3, 6, -1, 1, -5, -3, -7, -6, -5, 0, 0}; {6, -1, 6, -3, -3, 6, 5, 0, -3, -1, 0, 0}; {-4, 6, -2, 6, 8, 1, 1, -5, -4, -2, 0, 0}; {0, -5, 4, -3, 0, -6, -4, 7, -7, -4, 0, 0}; {5, -2, 5, -4, -3, 5, 5, -1, -3, 0, 0, 0}; {-7, 3, -5, 3, 5, -2, 0, -5, -6, -2, 0, 0}; {-1, -6, 3, -4, -1, -6, -6, 6, -7, -3, 0, 0}; {0, 8, -2, 4, 4, -4, -7, 3, 0, 0, 0, 0}; {0, 8, -2, 4, 4, -4, -7, 3, 0, 1, 0, 0}; {-1, -6, 3, -4, -1, -6, -5, 7, -7, -4, 0, 0}; {-2, 6, -4, 2, 2, -6, 8, 2, -1, 1, 0, 0}; {-7, 3, -5, 3, 5, -1, -1, -5, -5, -3, 0, 0}; {-7, 3, -5, 3, 5, -1, -1, -5, -5, -2, 0, 0}; {-2, -7, 2, -5, -1, -7, -7, 5, 8, -5, 0, 0}; {-3, 8, 1, -6, -2, 8, -7, 5, 8, -5, 0, 0}; {6, 0, 8, 0, 4, -3, -4, 7, -6, -4, 0, 0}; {-7, 3, -5, 3, 7, 0, 0, -6, -5, -3, 0, 0}; {7, 0, 7, -2, 2, -1, -1, 1, -7, 8, 0, 0}; {-7, 3, -5, 3, -7, -6, 5, 5, -3, -2, 0, 0}; {-4, 7, 0, -7, 0, 2, -1, 0, -7, -5, 0, 0}; {8, 2, -6, 2, -7, -6, 4, 4, -3, -2, 0, 0}; {2, -5, 2, -7, -1, -1, -7, 7, 0, -1, 0, 0}; {6, 0, 8, 0, 7, 8, 3, 3, -4, -3, 0, 0}; {8, 2, -6, 2, -7, -7, 4, 5, -4, -2, 0, 0}; {8, 2, -6, 2, -6, -6, 4, 4, -3, -2, 0, 0}; {7, 1, -7, 1, -7, -7, 3, 3, -3, -2, 0, 0}; {2, -5, 2, -7, 0, -1, -7, 8, -1, -2, 0, 0}; {5, -1, 7, -1, 7, 8, 3, 2, -3, -3, 0, 0}; {5, -1, 7, -1, 7, 8, 3, 3, -4, -3, 0, 0}; {-3, 6, -3, 4, -4, -5, 8, 7, -7, -6, 0, 0}; {8, 2, -6, 2, -5, -5, 3, 4, -3, -1, 0, 0}; {5, -1, 7, -1, 8, -7, 2, 2, -3, -3, 0, 0}; {-7, 3, -5, 3, -4, -3, 4, 5, -2, -1, 0, 0}; {2, -5, 2, -7, 2, 0, 8, 8, -1, 0, 0, 0}; {3, -3, 5, -3, 7, 7, 2, 3, -5, -3, 0, 0}; {3, -3, 5, -3, 7, 4, 4, -5, -1, 2, 0, 0}; {8, 0, 6, -4, 5, 0, -4, 8, -6, -4, 0, 0}; {4, -2, 6, -2, -7, 8, 1, 2, -5, -2, 0, 0}; {2, -4, 4, -4, 7, 6, 1, 2, -6, -3, 0, 0}; {2, -4, 4, -4, 7, 8, 2, 3, -5, -4, 0, 0}; {-3, 8, 1, -6, 6, -6, -1, 7, -5, 0, 0, 0}; {1, -5, 3, -5, 7, 3, 3, -6, -3, 1, 0, 0}; {-2, 7, -2, 5, 0, -3, 5, 5, -3, -1, 0, 0}; {0, -6, 2, -6, 6, 7, 0, 1, -5, -4, 0, 0}; {6, 0, 8, 0, -4, -1, 0, -1, 5, 6, 0, 0}; {2, -4, 4, -4, 8, 3, 3, -4, -1, 2, 0, 0}; {-2, 7, -2, 5, 1, 3, 4, 1, 7, 7, 0, 0}; {2, -4, 4, -4, -7, 3, 3, -4, -2, 1, 0, 0}; {-1, 6, -5, 1, -5, 4, -2, -5, -5, -5, 0, 0}; {8, 1, 8, 0, -4, 7, 6, -3, -1, 2, 0, 0}; {7, -1, 5, -4, 7, 8, 7, 4, -7, -7, 0, 0}; {-4, 5, -4, 4, 0, 2, 3, 1, 6, 7, 0, 0}; {-4, 5, -4, 4, 0, 3, 3, 0, 7, 7, 0, 0}; {-6, 3, -6, 2, -1, 8, 8, -1, 0, 1, 0, 0}; {7, 0, 7, -1, -4, 6, 5, -2, -1, 1, 0, 0}; {-5, 3, -7, 0, -4, 5, 5, -4, -1, 0, 0, 0}; {7, 0, 7, -1, -3, 6, 5, -2, -2, 0, 0, 0}; {5, -2, 5, -3, -5, 4, 4, -3, -2, -1, 0, 0}; {6, -1, 6, -2, -4, 6, 5, -4, -2, 1, 0, 0}; {-5, 5, -3, 6, 5, 0, 0, -7, -4, -1, 0, 0}; {1, -7, -1, 6, 4, -4, -6, 2, 1, 1, 0, 0}; {-5, 5, -3, 6, 6, 0, 0, -6, -4, -2, 0, 0}; {-5, 2, 7, -3, -6, 1, -2, 6, 3, 2, 0, 0}; {-1, 7, -3, 4, 2, -6, 8, 1, 0, 2, 0, 0}; {-5, 5, -3, 6, 6, 0, 1, -5, -4, -3, 0, 0}; {-6, 4, -4, 5, 5, -1, 0, -6, -5, -2, 0, 0}; {-6, 4, -4, 5, 5, 0, 0, 8, -5, -1, 0, 0}; {-6, 4, -4, 5, 6, -1, 1, -5, -5, -2, 0, 0}; {6, -1, 6, -2, -2, 7, 5, -2, -1, -2, 0, 0}; {0, 8, -2, 5, 4, -4, -7, 1, 1, 1, 0, 0}; {-5, 2, 7, -3, -5, 2, -2, 6, 3, 2, 0, 0}; {-6, 4, -4, 5, 6, 0, 0, -6, -4, -3, 0, 0}; {-6, 4, -4, 5, 6, 0, 0, -6, -4, -2, 0, 0}; {4, -3, 4, -4, -4, 5, 4, -3, -2, -1, 0, 0}; {4, -3, 4, -4, -4, 5, 5, -2, -3, -1, 0, 0}; {-7, 3, -5, 4, 5, -1, 0, -6, -5, -3, 0, 0}; {7, 1, -7, 2, 4, -3, -1, -6, -6, -3, 0, 0}; {4, -3, 4, -4, -3, 6, 4, -3, -2, -1, 0, 0}; {8, 2, -6, 3, 5, -1, -2, 8, -5, -3, 0, 0}; {8, 2, -6, 3, 5, -1, -2, 8, -5, -2, 0, 0}; {-6, 1, 6, -4, -5, 2, -2, 6, 3, 2, 0, 0}; {3, -4, 3, -5, -4, 5, 3, -3, -3, -2, 0, 0}; {-3, 8, 1, -5, -2, -7, -5, 5, 8, -4, 0, 0}; {8, 2, -6, 3, 5, -1, 0, -6, -5, -3, 0, 0}; {7, 1, -7, 2, 4, -2, -1, -6, -6, -3, 0, 0}; {1, -6, 1, -7, -6, 3, 3, -2, -4, -1, 0, 0}; {2, -4, 4, -3, 0, 6, -3, -4, -6, -5, 0, 0}; {7, 1, -7, 2, 5, -1, -2, 8, -5, -2, 0, 0}; {-5, 6, -1, -7, -3, 8, 8, 4, 8, -4, 0, 0}; {6, 0, 8, 1, 4, -2, -2, 8, -6, -3, 0, 0}; {5, -1, 7, 0, 3, -3, -3, 8, -6, -4, 0, 0}; {5, -1, 7, 0, 3, -3, -3, 8, -6, -3, 0, 0}; {-5, 5, -3, 6, -5, -7, -6, -2, 5, 6, 0, 0}; {4, -3, 4, -4, 0, -3, -2, 0, 8, 8, 0, 0}; {-6, 4, -4, 5, -6, -7, -7, -3, 6, 6, 0, 0}; {4, -3, 4, -4, 0, -2, -2, 0, 8, 7, 0, 0}; {-4, 6, -2, 7, -3, 1, 7, 8, 0, 0, 0, 0}; {-2, 7, -2, 6, -4, -4, 7, 6, -2, -3, 0, 0}; {4, -2, 6, -1, 6, 7, 3, 3, -4, -3, 0, 0}; {-2, 7, -2, 6, -4, -4, 7, 6, -2, -2, 0, 0}; {3,-3, 5, -2, 5, 6, 2, 2, -5, -4, 0, 0}; {-7, 2, -7, 1, 7, 7, -5, -4, 3, 3, 0, 0}; {8, 1, 8, 0, 6, 7, -3, -3, 3, 2, 0, 0}; {6, -1, 6, -2, 4, 8, -7, 3, 0, -3, 0, 0}; {-3, 6, -3, 5, -4, -4, 6, 5, -2, -2, 0, 0}; {3, -3, 5, -2, 6, 7, 2, 3, -5, -3, 0, 0}; {2, -4, 4, -3, 5, 6, 2, 3, -6, -4, 0, 0}; {-5, 4, -5, 3, -6, -6, 6, 5, -3, -3, 0, 0}; {8, 1, 8, 0, 7, 7, -5, -4, 3, 3, 0, 0}; {6, -1, 6, -2, 5, 6, -4, -3, 2, 2, 0, 0}; {-2, 7, -2, 6, -2, -3, 6, 5, -1, -1, 0, 0}; {-3, 6, -3, 5, -3, -3, 6, 5, -1, -2, 0, 0}; {5, -2, 5, -3, 5, 5, -6, -5, 2, 2, 0, 0}; {6, 0, 8, 1, -6, -4, 3, 4, -2, -1, 0, 0}; {-4, 5, -4, 4, -3, -6, 7, 4, 7, -7, 0, 0}; {-7, 2, -7, 1, -6, -7, 6, 5, 8, -7, 0, 0}; {-6, 4, -4, 5, -1, 0, 7, -5, -1, 1, 0, 0}; {-7, 2, -7, 1, -6, -6, 5, 5, -4, -3, 0, 0}; {6, -2, 4, -5, 4, -1, -5, 7, -7, -6, 0, 0}; {6, -2, 4, -5, 4, -1, -5, 8, -6, -5, 0, 0}; {6, -1, 6, -2, 8, 7, -2, 0, 3, 3, 0, 0}; {8, 1, 8, 0, -6, -7, 6, 5, -7, -6, 0, 0}; {8, 1, 8, 0, -6, -6, 5, 5, -4, -3, 0, 0}; {7, 0, 7, -1, -7, -7, 5, 5, -5, -4, 0, 0}; {-7, 1, 7, -2, 7, 8, 8, 3, -1, -4, 0, 0}; {-7, 2, -7, 1, -4, -5, 4, 4, -3, -2, 0, 0}; {-6, 2, 8, 0, -6, -7, -1, 1, 4, 3, 0, 0}; {1, -5, 3, -3, -7, -5, 1, 8, -5, 0, 0, 0}; {6, -1, 6, -1, -5, 5, 5, -4, -2, 1, 0, 0}; {5, -2, 5, -2, -6, 5, 5, -5, -2, 1, 0, 0}; {-5, 5, -3, 7, 4, 0, 1, -7, -4, 0, 0, 0}; {-2, 6, -4, 4, -1, -7, 8, -2, 0, 2, 0, 0}; {2, -6, 0, 8, 3, 5, 5, 3, 7, 8, 0, 0}; {-7, 2, -7, 2, -2, 2, 2, 0, 6, 7, 0, 0}; {-6, 4, -4, 6, 4, -1, 0, 8, -5, -1, 0, 0}; {-2, 6, -4, 4, 0, -6, 8, -1, 0, 2, 0, 0}; {3, -4, 3, -4, -6, 4, 4, -4, -2, -1, 0, 0}; {4, -3, 4, -3, -5, 5, 5, -2, -2, -2, 0, 0}; {1, -4, 5, 0, 1, -5, -1, 7, -6, -3, 0, 0}; {0, -5, 4, -1, 0, -6, -1, 7, -7, -3, 0, 0}; {-6, 4, -4, 6, 6, 0, 1, -6, -4, -3, 0, 0}; {-6, 1, 6, -3, -6, 2, -2, 5, 3, 1, 0, 0}; {-1, 7, -3, 5, 3, -4, -7, 1, 1, -1, 0, 0}; {-1, 7, -3, 5, 3, -4, -7, 1, 1, 0, 0, 0}; {2, -5, 2, -5, -6, 4, 3, -5, -3, 0, 0, 0}; {3, -4, 3, -4, -5, 5, 4, -3, -2, -2, 0, 0}; {-3, 5, -5, 3, 1, -6, 8, 1, 0, 0, 0, 0}; {2, -5, 2, -5, -6, 4, 4, -3, -3, -1, 0, 0}; {7, 1, -7, 3, 4, -2, -1, -7, -5, -3, 0, 0}; {8, 2, -6, 4, 5, -1, 1, -6, -5, -3, 0, 0}; {6, 0, 8, 2, 3, -3, -1, -7, -6, -3, 0, 0}; {6, 0, 8, 2, 3, -3, -1, -6, -6, -3, 0, 0}; {2, -5, 2, -5, -5, 5, 3, -4, -2, -2, 0, 0}; {2, -5, 2, -5, -5, 5, 3, -4, -2, -1, 0, 0}; {7, -2, 3, -6, 8, 0, -4, 4, 2, 1, 0, 0}; {7, -2, 3, -6, 8, 0, -4, 4, 2, 2, 0, 0}; {1, -6, 1, -6, -6, 4, 3, -4, -3, -1, 0, 0}; {6, -3, 2, -7, 7, -1, -4, 4, 1, 2, 0, 0}; {-6, 3, -6, 3, 4, -4, 0, -2, -5, -4, 0, 0}; {-6, 2, 8, 0, 0, 8, 7, 1, -2, 0, 0, 0}; {5, -1, 7, 1, 3, -2, -4, 7, -5, -2, 0, 0}; {-5, 3, -7, 1, 1, -6, 7, 0, -1, -1, 0, 0}; {3, -3, 5, -1, 1, -3, -4, 5, -7, -3, 0, 0}; {-2, 7, -2, 7, -7, 3, 1, -5, -3, -1, 0, 0}; {-2, 7, -2, 7, -7, 3, 2, -4, -4, -2, 0, 0}; {-2, 7, -2, 7, -6, -6, -5, -2, 8, 7, 0, 0}; {1, -6, 1, -6, -2, -4, -3, -1, 7, 7, 0, 0}; {1, -6, 1, -6, -2, -3, -3, -1, 7, 7, 0, 0}; {5, -1, 7, 1, 6, 6, 8, -5, 4, 5, 0, 0}; {0, -7, 0, -7, -2, -4, -4, -1, 7, 7, 0, 0}; {-1, 8, -1, 8, -3, -5, -4, -2, 7, 7, 0, 0}; {-1, 8, -1, 8, -3, -5, -4, -1, 5, 6, 0, 0}; {3, -4, 3, -4, 2, 4, -6, -6, 2, 1, 0, 0}; {0, 8, -2, 6, -5, -3, -3, 6, 3, -2, 0, 0}; {-6, 3, -6, 3, -5, -5, 5, 4, -2, -2, 0, 0}; {8, 1, 8, 1, -7, -7, 5, 4, -3, -3, 0, 0}; {7, 0, 7, 0, 8, 8, 4, 4, -4, -3, 0, 0}; {6, -1, 6, -1, 8, 8, 4, 4, -4, -3, 0, 0}; {8, 1, 8, 1, -5, 7, 6, -3, 0, 3, 0, 0}; {7, 0, 7, 0, -6, 7, 5, -3, 0, 2, 0, 0}; {4, -4, 2, -6, 3, 0, 8, 7, 0, 0, 0, 0}; {-7, 2, -7, 2, -4, -6, 3, 3, -3, -1, 0, 0}; {-7, 2, -7, 2, -4, -6, 4, 4, -3, -1, 0, 0}; {8, 1, 8, 1, -5, -7, 4, 4, -4, -2, 0, 0}; {5, -4, 1, -7, 1, -1, 3, 2, 7, 5, 0, 0}; {3, -4, 3, -3, 8, 4, 4, -5, -2, 1, 0, 0}; {4, -5, 0, 8, 2, -2, 4, 4, 6, 5, 0, 0}; {-1, 6, -5, 3, -3, -5, 1, 3, 5, 2, 0, 0}; {-1, 6, -5, 3, -3, -5, 1, 3, 5, 3, 0, 0}; {6, -1, 6, 0, -4, 0, 0, -1, 6, 7, 0, 0}; {-1, 7, -3, 6, 2, -5, -6, 1, 1, 1, 0, 0}; {-5, 3, -7, 2, -2, 8, 7, -1, 0, 0, 0, 0}; {-7, 0, 5, -3, -7, 1, -2, 5, 3, 1, 0, 0}; {-3, 5, -5, 4, 1, -6,-7, 1, 0, 0, 0, 0}; {-3, 8, 1, -3, -2, 8, -2, 6, 8, -3, 0, 0}; {-7, 1, 7, 0, -2, 8, 6, -2, -1, 0, 0, 0}; {2, 8, -4, 3, -1, 8, -5, 8, 1, -1, 0, 0}; {-1, 8, -1, -7, -7, 3, 1, -6, -3, -1, 0, 0}; {2, -4, 4, -1, 1, -4, -4, 6, -6, -3, 0, 0}; {3, -6, -1, 7, 6, -2, -5, 3, 1, 2, 0, 0}; {7, 0, 7, 1, 3, 7, -1, -2, -5, -6, 0, 0}; {5, -2, 5, -1, 1, 7, -1, -3, -6, -5, 0, 0}; {1, -5, 3, -2, 1, -4, -4, 6, -7, -3, 0, 0}; {2, -4, 4, -1, 3, 4, 7, -6, 4, 5, 0, 0}; {-4, 4, -6, 3, 7, -4, -4, 4, 1, -2, 0, 0}; {-4, 4, -6, 3, 8, -5, -4, 5, 2, -2, 0, 0}; {1, -6, 1, -5, 3, 3, -7, -5, 1, 2, 0, 0}; {-4, 4, -6, 3, -6, -7, -1, -1, 4, 3, 0, 0}; {-5, 3, -7, 2, -7, -7, -2, -2, 4, 3, 0, 0}; {5, -3, 4, -3, 5, 5, -5, -4, 2, 2, 0, 0}; {4, -4, 3, -4, 4, 4, -5, -4, 1, 1, 0, 0}; {-6, 2, -7, 2, -6, -6, 6, 5, -3, -3, 0, 0}; {-3, 4, -6, 2, -6, 8, -1, -1, 3, 2, 0, 0}; {-4, 4, -5, 4, -3, -4, 5, 4, -1, -1, 0, 0}; {5, -3, 4, -3, 6, 6, -3, -2, 2, 2, 0, 0}; {-7, 1, 8, 1, -6, -6, 6, 5, -3, -3, 0, 0}; {7, 0, 8, 2, -3, -2, 5, -6, -2, 0, 0, 0}; {2, -7, -1, 7, 1, -4, -7, 1, 2, 3, 0, 0}; {-3, 6, -2, 8, 4, 1, 1, -7, -3, 0, 0, 0}; {7, -1, 6, -1, -6, 6, 5,-4,-1, 1, 0, 0}; {-7, 1, 8, 1, -3, 7, 6, -2, -1, 1, 0, 0}; {-2, 7, -1, -7, 7, -4, -3, 7, -7, 0, 0, 0}; {-2, 7, -1, -7, 7, -4, -3, 7, -7, 1, 0, 0}; {8, 0, 7, 0, -3, 7, 6, -1, -1, 0, 0, 0}; {8, 0, 7, 0, -3, 7, 6, -1, -1, -1, 0, 0}; {7, -1, 6, -1, -4, 6, 5, -2, -1, 0, 0, 0}; {5, -1, 8, 3, 3, -3, 1, -7, -5, -2, 0, 0}; {8, 0, 7, 0, -2, 7, 7, 0, -1, -1, 0, 0}; {6, -2, 5, -2, -4, 6, 5, -2, -1, -1, 0, 0}; {1, 7, -4, 3, 0, 7, 3, 8, 6, 3, 0, 0}; {-6, 3, -5, 5, 6, 0, 0, -6, -4, -2, 0, 0}; {-3,3, 8, -1, -3, 4, 0, 7, 4, 3, 0, 0}; {-6, 3, -5, 5, 6, 0, -1, -7, -4, -2, 0, 0}; {1, -5, 4, -1, 2, 5, 6, -7, 4, 5, 0, 0}; {3,-4,4,-2,0, 7, -3, -4, -6, -5, 0, 0}; {-2, 4, -7, 0, 1, -4, 7, -3, -6, 0, 0, 0}; {-5, 4, -4, 6, -6, -7, -5, -3, 6, 6, 0, 0}; {5, -3, 4, -3, 0, -2, -1, 0, 8, 8, 0, 0}; {-7, 2, -6, 4, 8, 8, -6, -4, 6, 6, 0, 0}; {7, 0, 8, 2, 6, 6, -7, -5, 5, 6, 0, 0}; {-4, 4, -5, 4, 8, 8, -3, -3, 5, 4, 0, 0}; {-1, 8, 0, -6, -1, 2, -7, -6, 2, 1, 0, 0}; {-1, 7, -2, 7, -4, -5, -3, -2, 5, 5, 0, 0}; {-1, 7, -2, 7, -4, -5, -3, -2, 6, 6, 0, 0}; {-3, 6, -2, 8, -2, 1, 8, -7, 1, 1, 0, 0}; {-7, 1, 8, 1, 6, -6, -5, 4, 1, -2, 0, 0}; {7, -1, 6, -1, 5, 6, -4, -4, 3, 2, 0, 0}; {-4, 5, -3, 7, -2, 0, 7, 8, 0, 1, 0, 0}; {6, -2, 5, -2, 4, 5, -5, -5, 3, 2, 0, 0}; {0, 7, -3, 5, -5, -3, -2, 6, 3, -1, 0, 0}; {-1, 6, -4, 5, -4, -5, -1, -1, 5, 4, 0, 0}; {-2, 5, -5, 4, -5, -6, 0, 0, 4, 3, 0, 0}; {-7, 1, 8, 2, -6, -6, 5, 4, -2, -2, 0, 0}; {2, -6, 1, -5, 4, 4, -5, -4, 1, 1, 0, 0}; {7, -1, 6, 0, -6, 7, 5, -3, 0, 2, 0, 0}; {6, -3, 3, -4, 5, 8, -7, 2, -1, -4, 0, 0}; {-1, 7, -2, 8, 3, 2, -7, -3, 0, 1, 0, 0}; {-7, 1, 8, 2, -1, 2, 1, 0, -7, -7, 0, 0}; {-3, 6, -2, -7, 7, -4, -3, 7, 8, 0, 0, 0}; {-3,6,-2,-7, 7, -4, -3, 7, -7, 1, 0, 0}; {-4, 5, -3, 8, 7, 1, 4, -4, -4, -2, 0, 0}; {0, -6, 3, -1, -1, -6, -1, 7, -7, -3, 0, 0}; {0, -6, 3, -1, -1, -6, -1, 7, -7, -2, 0, 0}; {-1, 5, -6, 2, -1, 7, 2, 6, 6, 2, 0, 0}; {-4, 5, -3, 8, -6, 3, 8, -7, -7, -7, 0, 0}; {-6, 1, 7, 0, 1, 0, 2, 1, -6, 8, 0, 0}; {-1, 8, 0, -5, -2, 3, -4, -5, 8, -7, 0, 0}; {-1, 8, 0, -5, -2, 3, -4, -5, -7, -7, 0, 0}; {-1, 8, 0, -5, -2, 4, -4, -5, -7, -6, 0, 0}; {-1, 7, -2, 8, -5, -5, -3, -2, 7, 6, 0, 0}; {-1, 7, -2, 8, -4, -5, -3, -2, 6, 6, 0, 0}; {-3, 5, -4, 6, -6, -7, -4, -3, 6, 6, 0, 0}; {6, -1, 7, 2, 8, 6, 7, -5, 6, 6, 0, 0}; {2, -7, -1, -7, 0, -4, -6, -3, -6, 8, 0, 0}; {5, -5, 0, -7, 0, -3, 3, 2, 5, 4, 0, 0}; {-7, 0, 6, 0, -7, 7, -2, -1, 2, 2, 0, 0}; {8, -1, 5, -1, 8, 7, -2, -1, 3, 1, 0, 0}; {2, 8, -3, 6, -2, -4, 2, 2, 5, 2, 0, 0}; {-4, 1, 5, -3, 4, 1, 6, 5, 7, 3, 0, 0}; {2, 8, -3, 6, -2, -4, 2, 2, 5, 3, 0, 0}; {-4, 1, 5, -3, 4, 1, 6, 5, 7, 4, 0, 0}; {1, 7, -4, 5, -3, -4, 0, 5, 3, 0, 0, 0}; {1, 7, -4, 5, -3, -4, 2, 1, 5, 2, 0, 0}; {-5, 0, 4, -4, 3, 1, 6, 5, 7, 3, 0, 0}; {0, 6, -5, 4, -4, -5, 1, 1, 4, 2, 0, 0}; {5, -5, 0, -7, 2, -2, -6, 2, 3, 2, 0, 0}; {8, -1, 5, -1, -7, 6, -3, -1, 2, 2, 0, 0}; {-3, 5, -4, 7, 2, 1, 8, -4, 0, 0, 0, 0}; {-4, 4, -5, 6, 1, 0, 7, -5, -1, 0, 0, 0}; {8, -1, 5, -1, -7, 7, -2, 0, 3, 1, 0, 0}; {6, -3, 3, -3, 7, 5, -4, -1, 1, 2, 0, 0}; {-1, 5, -6, 3, -4, -6, 0, 2, 3, 3, 0, 0}; {5, -4, 2, -4, 7, 5, -5, -1, 1, 2, 0, 0}; {4, -5, 1, -5, 6, 4, -5, -1, 1, 1, 0, 0}; {2, -7, -1, -7, 4, 3, -6, -2, 0, 1, 0, 0}; {2, -7, -1, -7, 8, -1, 3, 1, -3, -3, 0, 0}; {7, -2, 4, -1, 3, -6, -6, 2, 0, -3, 0, 0}; {-6, 0, 5, -1, 5, 0, -3, -1, -4, -7, 0, 0}; {-2, 4, -7, 3, -5, -6, 1, 0, 4, 1, 0, 0}; {7, -7, -6, 0, 5, -3, 3, -2, -6, 4, 0, 0}; {5, -4, 2, -3, 7, 5, -5, -3, 2, 1, 0, 0}; {-1, 5, -6, 4, -3, -6, 0, 2, 4, 2, 0, 0}; {4, -5, 1, -4, 6, 4, -5, -2, 1, 0, 0, 0}; {4, -5, 1, -4, 6, 4, -5, -2, 1, 1, 0, 0}; {-1, 5, -6, 4, -3, -5, 0, 0, 5, 2, 0, 0}; {8, 0, 7, 3, -2, -2, 6, -6, -2, -2, 0, 0}; {2, -7, -1, -6, 4, 3, -5, -3, 1, -1, 0, 0}; {2, -7, -1, -6, 5, 3, -6, -2, 1, 0, 0, 0}; {1, -7, 0, -4, -3, 6, -4, -5, -7, -6, 0, 0}; {6, 1, -5, -5, 2, -4, 0, 3, 5, -1, 0, 0}; {3, -2, 8, 8, 0, -6, -1, 2, 4, -1, 0, 0}; {-6, 6, 1, 3, -5, 6, -5, -1, 2, -3, 0, 0}; {3, -2, 8, -7, 0, -6, -1, 2, 4, -2, 0, 0}; {0, -5, 5, 6, -2, -7, -2, 0, 4, -2, 0, 0}; {-6, -1, 3, -2, 5, 3, -4, 5, 4, 4, 0, 0}; {-3, 2, 6, 1, 8, 5, -2, 6, 5, 4, 0, 0}; {-7, -2, 2, -3, 5, 2, -5, 4, 5, 4, 0, 0}; {6, -7, -5, 4, -5, 6, 0, 8, -7, 4, 0, 0}; {5, 8, -6, 3, -6, 6, -2, 8, -7, 4, 0, 0}; {4, 7, -7, 2, -6, 5, -2, 8, -7, 3, 0, 0}; {-1, -5, 6, -7, 1, 2, -7, 0, -4, -2, 0, 0}; {-1, -5, 6, -7, 1, 2, -7, 1, -4, -2, 0, 0}; {0, -1, -3, 3, -2, 3, -4, 4, 6, -7, 0, 0}; {-3, -7, 4, 7, -1, 1, 8, -1, -4, -2, 0, 0}; {7, 1, -6, -5, 2, -4, 2, 3, 5, 0, 0, 0}; {-4, 8, 3, 6, -1, 0, 7, -2, -4, -2, 0, 0}; {6, 1, -5, -3, 5, 5, -4, 2, -2, -1, 0, 0}; {7, 2, -4, -2, 6, 6, -3, 3, -2, -1, 0, 0}; {8, 2, -5, -4, 4, -3, 1, 4, 5, -1, 0, 0}; {1, -6, 2, 2, -7, 2, 5, 6, 8, 1, 0, 0}; {-7, -2, 2, -2, 5, 3, -4, 5, 4, 4, 0, 0}; {-3, 3, 8, 5, -3, -3, 6, 0, 1, 2, 0, 0}; {2, 6, -7, 4, -6, 8, -1, 7, 7, 4, 0, 0}; {6, -5, -1, -5, 3, 1, -7, 3, 5, 4, 0, 0}; {5, -6, -2, -6, 2, 0, -7, 2, 4, 2, 0, 0}; {5, -6, -2, -6, 2, 0, -7, 2, 4, 3, 0, 0}; {-1, 3, 6, 1, 8, 5, -3, 6, 6, 3, 0, 0}; {-1, 3, 6, 1, 8, 5, -3, 6, 6, 4, 0, 0}; {-1, 1, 2, -5, 1, -5, 3, -4, -5, 7, 0, 0}; {-5, -1, 2, -3, 5, 2, -5, 4, 6, 3, 0, 0}; {2, 1, -1, 6, 0, 4, -4, 5, 5, -6, 0, 0}; {-4, -6, 7, -3, 6, -7, 0, -7, 7, -5, 0, 0}; {1, 0, -2, 5, -1, 4, -4, 4, 5, -7, 0, 0}; {-5, -7, 6, -4, 5, -7, 0, 8, 7, -5, 0, 0}; {-5,-7, 6, -4, 5,-7, 0, 8, 7, -4, 0, 0}; {3, 0, -4, 1, -6, -4, 3, -5,-7, -4, 0, 0}; {1, -2, -6, -1, 8, -5, 2, -6, -7, -4, 0, 0}; {5, 0, -6, -3, 4, 5, -5, 2, -2, -1, 0, 0}; {0, -3, -7, -2, 7, -6, 2, -7, -7, -5, 0, 0}; {0, -3, -7, -2, 7, -6, 2, -7, -7, -4, 0, 0}; {7, 3, -2, 2, -2, 8, -5, 0, -5, -3, 0, 0}; {2, 6, -7, 5, -5, 8, -1, 8, 5, 5, 0, 0}; {-5, -2, 0, -5, 0, -4, 3, -5, 8, 6, 0, 0}; {1, 8, -2, -3, 6, 7, -1, -5, 0, 1, 0, 0}; {-5, 1, 6, 4, -4, -4, 4, -2, 2, 1, 0, 0}; {0, 7, -3, -4, 5, 6, -1, -6, -1, 0, 0, 0}; {-1, 6, -4, -5, 4, 5, -2, -7, -1, 0, 0, 0}; {-2, 2, 5, 1, 8, 5, -3, 6, 6, 4, 0, 0}; {4, 7, -7, 4, -5, 7, -1, 7, 8, 5, 0, 0}; {0, -3, -7, -1, 8, -5, 2, -6, -7, -3, 0, 0}; {8, 4, -1, 4, -4, -2, 5, -3, -5, -3, 0, 0}; {-1, -4, 8, -2, 7, -6, 2, -7, -7, -4, 0, 0}; {-1, -4, 8, -2, 7, -6, 2, -7, -7, -3, 0, 0}; {-2,-5, 7, -3, 6, -7, 1, 8, -7, -5, 0, 0}; {6, 2, -3, 2, -5, -3, 4, -4, -5, -3, 0, 0}; {8, 4, -1, 4, -1, 7, -4, 0, -5, -4, 0, 0}; {2, -1, -5, 2, -7, -3, 3, -5, -7, -3, 0, 0}; {8, 4, -1, 6, -5, 5, 8, 5, 8, -6, 0, 0}; {7, 3, -2, 5, -6, 4, 7, 5, 7, -7, 0, 0}; {2, -5, 3, 7, 2, -7, -7, 0, 3, 4, 0, 0}; {-7, 3, -4, 1, -2, 6, 6, -2, 0, 3, 0, 0}; {-5, 4, -4, 1, 1, 8, 3, 4, 6, 5, 0, 0}; {-7, 2, -6, -1, -1, 6, 1, 3, 6, 3, 0, 0}; {8, 1, -7, -2, -2, 5, 1, 3, 6, 3, 0, 0}; {2, -6, 1, 5, 4, -5, 6, 6, 8, 5, 0, 0}; {-5, 4, -4, 1, 1, 7, 2, 4, 7, 4, 0, 0}; {-1, -6, 4, -5, -1, -7, -6, 8, -7, -6, 0, 0}; {-1, -7, 2, 8, -2, -5, -7, 0, 2, 4, 0, 0}; {8, 2, -5, 1, 8, -6, 4, 3, -3, -2, 0, 0}; {-1, -6, 4, -5, 3, 6, -1, -1, -4, -3, 0, 0}; {-3, 8, 2, -7, 2, 4, -1, 0, -6, -4, 0, 0}; {7, 1, -6, 0, 8, -7, 4, 4, -4, -3, 0, 0}; {0, -5, 5, -4, 5, 5, -1, 0, -5, -2, 0, 0}; {7, 0, 8, -3, 6, 8, 8, 5, -7, -7, 0, 0}; {3, -3, 6, -4, -6, 3, 3, -3, -1, 2, 0, 0}; {2,-3, 7, -1, 2, -5, -1, -7, -6, -3, 0, 0}; {-6, 4, -3, 4, 6, -1, 1, -4, -5, -2, 0, 0}; {-1, -6, 4, -4, -1, -7, -4, 8, -7, -5, 0, 0}; {-2, -7, 3, -5, -2, 8, -5, 8, 8, -4, 0, 0}; {-3, 8, 2, -6, -3, 7, -6, 8, 8, -6, 0, 0}; {-3, 8, 2, -6, -2, 8, -7, 6, 8, -6, 0, 0}; {-4, 7, 1, -7, -3, 7, -7, 6, 8, -6, 0, 0}; {-3, 8, 2, -6, -1, -7, -6, 6, -7, -4, 0, 0}; {4, -1, -7, 1, 7, 5, 6, -4, 0, 3, 0, 0}; {3, -2, 8, 0, 6, 4, 5, -5, -1, 3, 0, 0}; {5, 0, -6, 2, -7, 5, 6, -3, 0, 3, 0, 0}; {0, -5, 5, -3, 4, 3, 4, -5, -1, 3, 0, 0}; {-2, -7, 3, -5, 3, 2, 3, -6, -2, 2, 0, 0}; {3, -1, -6, 3, -4, -3, -3, 6, -5, 0, 0, 0}; {8, 2, -5, 2, -7, -7, 4, 3, -3, -2, 0, 0}; {5, -1, 8, -1, 7, 8, 2, 1, -3, -2, 0, 0}; {0, -7, 1, 7, -2, -2, 8, 7, -1, -2, 0, 0}; {4,-2, 7, -2, 6, 7, 2, 2, -4, -3, 0, 0}; {8, 2, -5, 2, -6, 7, 6, -3, 0, 3, 0, 0}; {-4, 7, 1, -7, 2, 1, 1, -7, -3, 1, 0, 0}; {4,-2, 7, -2, 7, 8, 2, 2, -4, -3, 0, 0}; {5, -1, 8, -1, -7, 8, 2, 3, -5, -2, 0, 0}; {3, -3, 6, -3, 7, 7, 1, 2, -5, -3, 0, 0}; {2, -4, 5, -4, 6, 7, 1, 2, -5, -4, 0, 0}; {-6, 4, -3, 4, -2, 1, 3, 1, 5, 7, 0, 0}; {3, -3, 6, -3, 8, 7, 1, 2, -6, -3, 0, 0}; {3, -4, 4, -6, 4, 5, 5, 2, -4, -5, 0, 0}; {2, -5, 3, -7, 3, 6, 6, 3, 7, 8, 0, 0}; {-4, 5, -3, 3, 3, -2, -4, 5, 5, -3, -2, 0, 0}; {-1, -7, 2, -7, 5, 6, 0, 1, -6, -4, 0, 0}; {8, 2, -5, 2, -2, 0, 0, 0, 6, 7, 0, 0}; {2, -5, 3, -7, 4, 5, 4, 3, -7, -7, 0, 0}; {0, -7, 1, 7, 2, 5, 5, 2, 7, 8, 0, 0}; {-6, 3, -5, 1, -3, 8, 7, -3, -1, 3, 0, 0}; {8, 1, -7, -1, -5, 6, 6, -4, -1, 2, 0, 0}; {1, -6, 2, 8, 4, 5, 3, 3, 8, -7, 0, 0}; {0, -7, 1, 7, 3, 4, 3, 2, 8, -7, 0, 0}; {-1, 8, 0, 6, 2, 4, 4, 1, 7, 8, 0, 0}; {8, 1, -7, 0, -4, -7, 3, 3, -5, -2, 0, 0}; {3, -5, 2, 8, 3, -1, 8, 7, -1, 0, 0, 0}; {-7, 1, 8, -2, -7, -7, 6, 5, -5, -4, 0, 0}; {-5, 4, -4, 3, -1, 1, 2, 0, 7, 7, 0, 0}; {4, -4, 3, -7, 4, 5, 5, 3, -7, -7, 0, 0}; {5, -3, 4, -6, 6, 7, 6, 3, -7, -7, 0, 0}; {-2, 6, -3, 3, 1, -7, 5, 5, 7, 6, 0, 0}; {-3, 8, 2, -5, -2, 8, -5, 7, -7, -4, 0, 0}; {-4, 7, 1, -6, -3, 8, -7, 6, 8, -5, 0, 0}; {0, -7, 1, 8, -7, 2, 2, -2, -4, -2, 0, 0}; {0, -7, 1, 8, -7, 2, 2, -2, -4, -1, 0, 0}; {5, -1, 8, 0, 2, -4, -3, -6, -6, -4, 0, 0}; {-1, 8, 0, 7, 8, 1, 2, -2, -4, -2, 0, 0}; {4,-2, 7, -1, 1, -5, -3, -6, -7, -3, 0, 0}; {0,-7, 1, 8, -7, 2, 3, -2, -4, -2, 0, 0}; {0,-7, 1, 8, -7, 2, 3, -2, -4, -1, 0, 0}; {7, 1, -6, 2, 5, -2, -1, -6, -5, -3, 0, 0}; {-4, 4, -5, 1, 2, -6, 7, 2, 0, -1, 0, 0}; {-7, 3, -4, 4, -6, 8, 8, -2, 2, 5, 0, 0}; {-1, 8, 0, 7, -3, -3, 7, 6, -1, -1, 0, 0}; {4, -2, 7, -1, 6, 7, 2, 2, -4, -3, 0, 0}; {5, -1, 8, 0, 7, 8, 3, 4, -4, -2, 0, 0}; {7, 0, 8, -1, 5, 8, -6, 3, 0, -2, 0, 0}; {7, 1, -6, 2, -7, 7, 6, -3, 0, 3, 0, 0}; {7, 1, -6, 2, -7, 7, 7, -2, 2, 5, 0, 0}; {6, 0, -7, 1, 8, 7, 6, -3, 0, 3, 0, 0}; {-2, 7, -1, 6, -3, -3, 6, 5, -1, -1, 0, 0}; {3, -3, 6, -2, 6, 7, 1, 1, -4, -3, 0, 0}; {-5, 4, -4, 3, -6, -6, 5, 5, -3, -3, 0, 0}; {7, 0, 8, -1, 6, 6, -5, -4, 2, 2, 0, 0}; f 6, -1, 7, -2, 5, 5, -6, -5, 2, 2, 0, 0}; {1, -7, 0, 6, -4, -3, -3, 6, 2, -2, 0, 0}; {-5, 4, -4, 3, -5, -5, 6, 5, -3, -3, 0, 0}; {1, -6, 2, -7, 2, 1, 7, 8, 0, 1, 0, 0}; {-4, 5, -3, 4, -3, -4, 5, 5, -2, -1, 0, 0}; {-5, 4, -4, 3, -4, -5, 4, 4, -2, -1, 0, 0}; {-5, 4, -4, 3, -4, -5, 5, 5, -3, -2, 0, 0}; {-6, 3, -5, 2, -5, -6, 5, 5, -4, -3, 0, 0}; {-6, 3, -5, 2, -5, -5, 5, 5, -3, -3, 0, 0}; {-4, 4, -5, 1, -7, -6, -6, 4, 0, -3, 0, 0}; {3, -5, 2, 8, 1, -3, -6, 6, 8, -6, 0, 0}; {7, -1, 6, -4, 5, 3, -6, -7, 1, 0, 0, 0}; {-6, 3, -5, 2, -4, -5, 4, 4, -3, -2, 0, 0}; {-7, 2, -6, 1, -5, -5, 4, 4, -3, -2, 0, 0}; {7, 0, 8, -1, -7, -7, 4, 4, -4, -3, 0, 0}; {-7, 1, 8, -2, 7, 8, 8, 3, -2, -4, 0, 0}; {8, 0, 7, -3, 7, 7, 7, 3, -3, -4, 0, 0}; {-2, 7, -1, 6, 1, 3, 3, 1, 8, 8, 0, 0}; {5, -2, 6, -2, -7, 5, 4, -4, -1, 2, 0, 0}; {4, -3, 5, -3, 8, 5, 4, -4, -1, 2, 0, 0}; {-6, 1, 7, -3, 6, 1, -1, 1, -3, -5, 0, 0}; {2, -5, 3, -5, 6, 6, 2, 3, -6, -4, 0, 0}; {-5, 4, -4, 4, -1, 1, 2, 1, 6, 7, 0, 0}; {-5, 4, -4, 4, -1, 2, 3, 1, 6, 7, 0, 0}; {-6, 1, 7, -3, 7, 1, -4, -7, -6, -6, 0, 0}; {4, -3, 5, -3, -7, 5, 4, -5, -2, 2, 0, 0}; {-6, 3, -5, 3, -1, 1, 1, 1, 6, 7, 0, 0}; {4, -4, 3, -6, 5, 6, 5, 4, 8, -7, 0, 0}; {-7, 0, 6, -4, 7, 1, -5, -7, -6, -6, 0, 0}; {4, -5, 1, 7, 2, -2, 5, 5, 7, 5, 0, 0}; {-7, 2, -6, 2, -1, 1, 1, 0, 6, 7, 0, 0}; {2, -5, 3, -5, -7, 4, 3, -6, -3, 1, 0, 0}; {8, 1, -7, 1, -1, 1, 1, -1, 6, 7, 0, 0}; {-4, 6, -1, 8, 8, 1, 4, -4, -3, -2, 0, 0}; {2, -5, 3, -5, -6, 3, 3, -3, -3, -1, 0, 0}; {-5, 3, -6, 1, 0, 7, 3, 4, 7, 5, 0, 0}; {-7, 3, -4, 5, 6, -1, 2, -5, -4, -2, 0, 0}; {-2, -7, 3, -3, -1, -7, -2, 7, -7, -3, 0, 0}; {8, -1, 5, -5, -7, 0, -3, 5, 3, 2, 0, 0}; {6, 0, -7, 2, 3, -3, -3, 8, -5, -2, 0, 0}; {6, 0, -7, 2, 3, -3, -2, -7, -5, -3, 0, 0}; {6, 0, -7, 2, 3, -3, -2, -7, -5, -2, 0, 0}; {0, -7, 1, -7, -7, 2, 2, -3, -3, 0, 0}; {1, -6, 2, -6, -6, 3, 4, -2, -3, -2, 0, 0}; {-5, 2, 8, -2, -3, 4, 0, 6, 5, 2, 0, 0}; {1, -6, 2, -6, -5, 4, 3, -4, -2, -1, 0, 0}; {-6, 5, -1, -7, -4, 7, 8, 4, 8, -4, 0, 0}; {6, -3, 3, -7, 8, -1, -4, 5, 2, 2, 0, 0}; {0, -7, 1, -7, -6, 3, 3, -3, -3, -2, 0, 0}; {3, -3, 6, -1, 1, -5, -3, -7, -7, -3, 0, 0}; {3, -3, 6, -1, 1, -5, -3, -7, -7, -4, 0, 0}; {3, -3, 6, -1, 1, -5, -3, -7, -6, -4, 0, 0}; {4, -2, 7, 0, 2, -4, -2, -7, -6, -4, 0, 0}; {4, -2, 7, 0, 2, -4, -2, -7, -6, -3, 0, 0}; {4, -2, 7, 0, 2, -3, -4, 6, -6, -2, 0, 0}; {8, -1, 5, -5, -5, 2, -2, 5, 4, 2, 0, 0}; {8, 0, 7, -2, -1, 7, 6, 0, -2, 0, 0, 0}; {-3, 6, -2, 6, 8, 1, 1, -4, -4, -2, 0, 0}; {4, -3, 5, -3, 0, -2, -2, 0, 6, 7, 0, 0}; {-4, 4, -5, 2, 4, 2, 1, 2, -5, -7, 0, 0}; {-3, 6, -2, 6, -6, -6, -5, -3, 7, 6, 0, 0}; {2, -5, 3, -5, -1, -4, -3, 0, 6, 7, 0, 0}; {2, -5, 3, -5, -1, -4, -3, 0, 7, 7, 0, 0}; {-5, 4, -4, 4, -5, -5, 5, 4, -2, -2, 0, 0}; {-6, 3, -5, 3, -6, -6, 5, 5, -3, -2, 0, 0}; {3, -4, 4, -4, 3, 4, -7, -6, 2, 2, 0, 0}; {2, -5, 3, -5, 2, 3, -7, -6, 1, 1, 0, 0}; {-6, 3, -5, 3, -6, -5, 5, 4, -2, -2, 0, 0}; {-3, 5, -4, 3, -7, -5, -5, 5, 1, -2, 0, 0}; {-6, 3, -5, 3, -5, -5, 4, 3, -2, -2, 0, 0}; {8, 1, -7, 1, -7, -7, 2, 2, -3, -2, 0, 0}; {-7, 2, -6, 2, -6, -6, 4, 4, -3, -2, 0, 0}; {-7, 2, -6, 2, -6, -6, 5, 5, -3, -2, 0, 0}; {-7, 2, -6, 2, -6, -6, 5, 6, -4, -2, 0, 0}; {-5, 3, -6, 1, 8, -6, -6, 4, 0, -3, 0, 0}; {-7, 2, -6, 2, -5, -5, 5, 5, -3, -2, 0, 0}; {8, 1, -7, 1, -6, -6, 4, 4, -3, -2, 0, 0}; {8, 1, -7, 1, -6, -6, 5, 5, -4, -3, 0, 0}; {8, 1, -7, 1, -6, -6, 5, 6, -4, -2, 0, 0}; {5, -2, 6, -2, 7, 7, 4, 4, 8, -7, 0, 0}; {7, 0, 8, 0, -6, 6, 5, -3, 0, 3, 0, 0}; {6, -1, 7, -1, -7, -7, 3, 3, -4, -3, 0, 0}; {5, -2, 6, -2, 8, 8, 3, 3, -4, -3, 0, 0}; {3, -4, 4, -4, 6, 6, 2, 3, -6, -4, 0, 0}; {4, -3, 5, -2, 8, 5, 4, -5, -2, 2, 0, 0}; {-2, 6, -3, 5, -2, -3, 6, 5, -1, -1, 0, 0}; {4, -3, 5, -2, -7, 5, 5, -4, -1, 2, 0, 0}; {3, -4, 4, -3, 8, 4, 4, -5, -2, 2, 0, 0}; {1, -6, 2, -5, 6, 3, 3, -6, -2, 1, 0, 0}; {-5, 3, -6, 2, -4, -5, 7, 6, -3, -3, 0, 0}; {1, -6, 2, -5, 7, 3, 3, -6, -3, 1, 0, 0}; {6, -1, 7, 0, -4, -1, 0, -1, 5, 6, 0, 0}; {1, 7, -4, 2, -4, 5, -1, -4, -4, -5, 0, 0}; {-6, 2, -7, 1, -3, 8, 6, -2, 0, 2, 0, 0}; {-1, 8, 0, -7, 6, 2, 2, -6, -3, 0, 0, 0}; {-4, 4, -5, 3, 0, -7, 8, 1, 0, -1, 0, 0}; {4, -3, 5, -2, -4, -1, -1, -2, 5, 6, 0, 0}; {-5, 3, -6, 2, 0, -7, 7, 0, 0, 0, 0, 0}; {-6, 2, -7, 1, -1, 8, 7, 0, -1, -1, 0, 0}; {-6, 2, -7, 1, -1, 8, 7, 0, -1, 0, 0, 0}; {-1, 8, 0, -7, 8, 2, 2, -4, -3, -2, 0, 0}; {-1, 8, 0, -7, 8, 2, 2, -4, -3, -1, 0, 0}; {5, -4, 2, -7, 7, -1, -4, 4, 2, 1, 0, 0}; {-6, 2, -7, 1, 0, -7, 7, 0, 0, -1, 0, 0}; {7, -1, 6, -2, -3, 6, 6, 0, -2, -1, 0, 0}; {1, 7, -4, 2, 0, 7, 2, 8, 6, 3, 0, 0}; {1, 8, -2, 5, 4, -4, -6, 3, 0, 1, 0, 0}; {6, -2, 5, -3, -3, 6, 5, -1, -2, 0, 0, 0}; {0, 7, -3, 4, 3, -5, -7, 3, 0, 1, 0, 0}; {0, 7, -3, 4, 3, -5, -7, 3, 0, 2, 0, 0}; {-5, 4, -4, 5, 8, -7, -6, -4, 7, 6, 0, 0}; {-7, 2, -6, 3, 6, 8, -7, -4, 7, 6, 0, 0}; {5, -2, 6, -1, 2, 7, -1, -3, -6, -5, 0, 0}; {4, -3, 5, -2, 1, 6, -1, -3, -6, -5, 0, 0}; {0,-7, 1, -6, -3, -5, -4, -1, 7, 8, 0, 0}; {-3, 6, -2, 7, -5, -6, -5, -3, 7, 7, 0, 0}; {-4, 5, -3, 6, -6, -6, -5, -3, 7, 6, 0, 0}; {-6, 3, -5, 4, 8, 8, -6, -4, 6, 6, 0, 0}; {-3, 6, -2, 7, -4, -6, -5, -2, 6, 6, 0, 0}; {-5, 4, -4, 5, -6, -7, -6, -3, 6, 6, 0, 0}; {-6, 3, -5, 4, -7, 8, -6, -4, 6, 6, 0, 0}; {6, -2, 5, -3, 2, -1, -2, 0, -6, -7, 0, 0}; {-5, 4, -4, 5, -5, -7, -7, -4, 8, 7, 0, 0}; {-3, 5, -4, 4, -7, -4, -3, 5, 2, -1, 0, 0}; {-5, 3, -6, 2, 8, 7, -3, -3, 3, 3, 0, 0}; {-1, -7, 2, -4, 4, 5, 1, 3, -6, -2, 0, 0}; {-4, 4, -5, 3, -7, -7, -2, -2, 4, 3, 0, 0}; {4, -3, 5, -2, 5, 6, 2, 2, -5, -4, 0, 0}; {2, -6, 1, -7, 0, -1, 8, 6, 0, -1, 0, 0}; {7, -1, 6, -2, 5, 5, -4, -4, 2, 1, 0, 0}; {8, 0, 7, -1, 7, 7, -4, -4, 3, 2, 0, 0}; {-4, 5, -3, 6, -1, 0, 7, -6, -2, 1, 0, 0}; and {2, -6, 1, -7, 1, 1, 8, 6, 2, -1, 0, 0}.

An equivalent sequence of a sequence in the foregoing sequence sets may be expressed as $\{q_n\}$. An element $q_n$ in the equivalent sequence $\{q_n\}$ meets $q_n = s_n + u_n \pmod{M}$.

In specific implementation, a sequence $\{u_n\}$ including $u_n$ includes:

$u_n = f + g \cdot n \pmod{M}$, where n=0, 1, ..., and N-1, N is a sequence length, $f \in \{0, 1, 2, ..., M - 1\}$, $g \in \{0, 1, 2, ..., M - 1\}$, and M=12.

Herein, an equivalent sequence of $\{s_n\}$ is $\{q_n\}$. Therefore, a difference between a sequence $\{u \cdot e^{2\pi j s_n / M}\}$ and a sequence $\{u \cdot e^{2\pi j q_n / M}\}$ is a constant, or a constant and transformation of a cyclic shift, so that maximum values of absolute values of cyclic shift autocorrelation values of the two sequences are 1.

When M=16, an equivalent sequence has a same definition, but M=16 instead of 12, that is, an equivalent sequence of a sequence in the foregoing sequence sets may be expressed as $\{q_n\}$. An element $q_n$ in the equivalent sequence $\{q_n\}$ meets $q_n = s_n + u_n \pmod{M}$, where M=16.

In specific implementation, a sequence $\{u_n\}$ including $u_n$ includes:

$u_n = f + g \cdot n \pmod{M}$, where n=0, 1, ..., N-1, N is a sequence length, $f \in \{0, 1, 2, ..., M - 1\}$, $g \in \{0, 1, 2, ..., M - 1\}$, and M=16.

In a possible example, a process in which after accessing the network, the terminal device determines the sequence $\{f_n\}$ including the N elements may be shown in FIG. 2. A specific procedure is as follows:

The terminal device determines the sequence $\{x_n\}$ and A. A value of n ranges from 0 to N-1, and A is a non-zero complex number. The sequence $\{x_n\}$ may be stored in the terminal device, or may be configured by the network device for the terminal device, or may be obtained by the terminal device through calculation according to a predefined formula. For example, the sequence $\{x_n\}$ is obtained by using the foregoing disclosed element $x_n$ in $\{x_n\}$, where $x_n = u \cdot e^{2\pi j \cdot s_n / M}$, and M=12. A sequence $\{f_n = A \cdot x_n\}$ is obtained by multiplexing A and $x_n$. A value range of A is $\{1, -1, j, -j\}$.

S102. The terminal device maps the sequence $\{f_n\}$ including the N elements to N subcarriers to generate a first signal, and sends the first signal to a network device.

Herein, S102 is mainly performed as follows: The terminal device respectively maps the N elements in the configured sequence $\{f_n\}$ to the N subcarriers to generate the first signal, and sends the first signal to the network device.

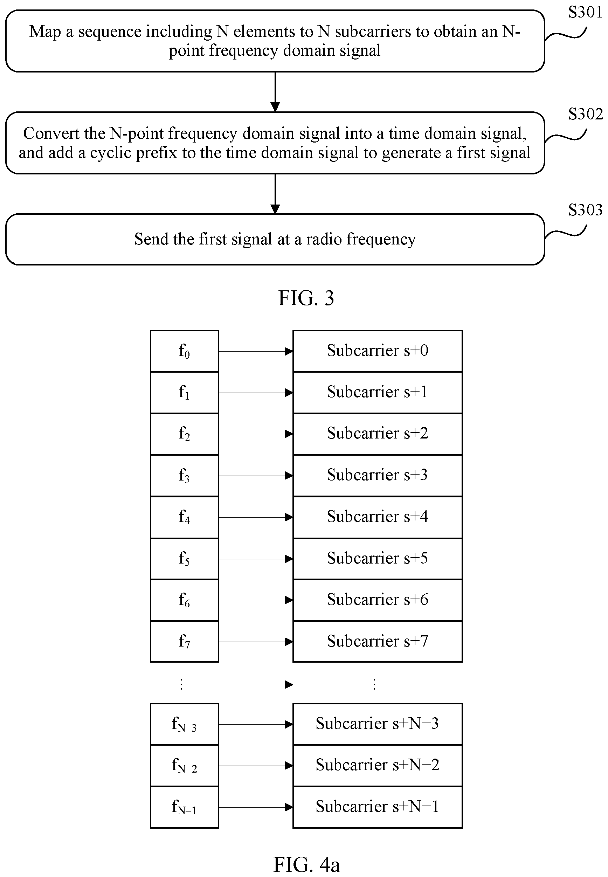

Optionally, a specific process in which the terminal device maps the sequence $\{f_n\}$ including the N elements to N subcarriers to generate a first signal, and sends the first signal to a network device is shown in FIG. 3 and includes the following steps.

S301. The terminal device maps the sequence $\{f_n\}$ including the N elements to the N subcarriers to obtain an N-point frequency domain signal (namely, a frequency domain signal including the N elements).

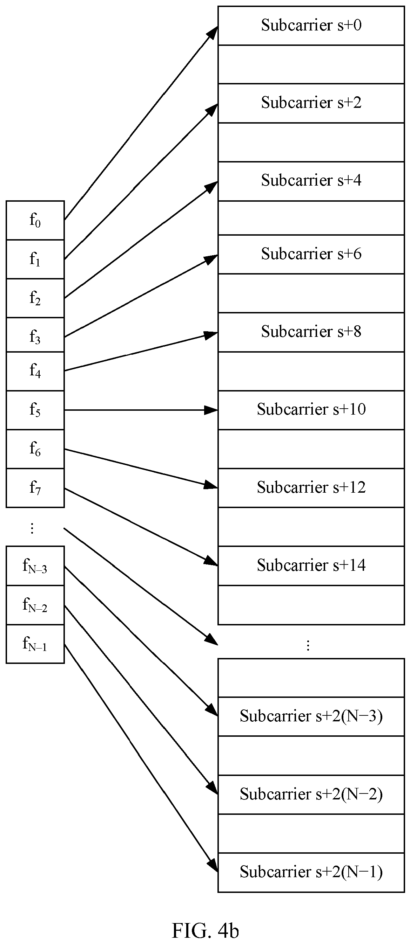

In FIG. 4a and FIG. 4b disclosed in the following embodiment of this application, s denotes an index of a first subcarrier, in subcarriers in a communications system, in the N subcarriers to which the sequence $\{f_n\}$ is mapped.

Optionally, the terminal device maps the sequence $\{l_n\}$ including the N elements to N consecutive subcarriers. As shown in FIG. 4a, optionally, elements $f_0$ to $f_{N-1}$ in the sequence $\{f_n\}$ are respectively mapped to N consecutive subcarriers, and the subcarriers are numbered s+0, s+1, ..., s+N-1.

In a possible example, the terminal device sequentially maps the N elements in the sequence $\{f_n\}$ to the N subcarriers in descending order of the subcarriers. One element in the sequence $\{f_n\}$ is mapped to one frequency domain subcarrier. The frequency domain subcarrier is a minimum unit of a frequency domain resource, and is used to carry data information.

In a possible example, the terminal device sequentially maps the N elements in the sequence $\{f_n\}$ to the N subcarriers in ascending order of the subcarriers. Mapping one element in the sequence $\{f_n\}$ to one subcarrier means that the element is carried on the subcarrier. After the mapping, when the terminal device sends data at a radio frequency, it is equivalent to that the element is sent on the subcarrier. In the communications system, different terminal devices may occupy different subcarriers to send data. Locations of the N subcarriers in a plurality of subcarriers in the communications system may be predefined or may be configured by the network device by using signaling.

Optionally, the N elements in the sequence $\{f_n\}$

may be respectively mapped to N equally spaced subcarriers. As shown in FIG. 4b, optionally, a spacing between the N subcarriers is 1, and the N subcarriers are equally spaced in frequency domain. A spacing between subcarriers to which elements $f_0$ to $f_{N-1}$ in the sequence $\{f_n\}$ is one subcarrier. Specifically, the N elements in the sequence $\{f_n\}$ are respectively mapped to the N equally spaced subcarriers, and the subcarriers are numbered s+0, s+2, ..., and s+2(N-1).

In this embodiment of this application, a manner of respectively mapping the N elements in the sequence $\{f_n\}$ to the N subcarriers is not limited to the foregoing manners.

S302. Transform the N-point frequency domain signal into a time domain signal through inverse fast Fourier transformation (inverse fast Fourier transformation, IFFT), and add a cyclic prefix to the time domain signal to generate the first signal.

S303. Send the first signal at a radio frequency.

Optionally, during execution of S302, the time-domain signal obtained by the terminal device by performing IFFT on the generated N-point frequency domain signal is an OFDM symbol. When performing S303, the terminal device sends the first signal at the radio frequency. In other words, the terminal device sends, on the N subcarriers, the first signal that carries the sequence $\{f_n\}$.

In a possible example, the terminal device may send, on one OFDM symbol, the first signal that carries the sequence $\{f_n\}$, or may send, on a plurality of OFDM symbols, the first signal that carries the sequence $\{f_n\}$.

Optionally, the first signal is a reference signal. Specifically, the first signal may be UCI and a DMRS, or may be acknowledgment (acknowledgment, ACK) information, or negative acknowledgment (negative acknowledgment, NACK) information, or uplink scheduling request (scheduling request, SR) information. In this embodiment of this application, the first signal includes but is not limited to only the foregoing information.

Optionally, the first signal is a signal used to carry communication information. In specific implementation, the communication information may be carried through sequence selection or may be carried through sequence modulation, but a manner of carrying the communication information is not limited thereto.

Optionally, in the sequence selection manner, $2^n$ orthogonal sequences are allocated to one terminal device. Optionally, the $2^n$ orthogonal sequences may be obtained by performing $2^n$ cyclic shifts on one root sequence, and the $2^n$ orthogonal sequences can carry n-bit information. For example, the $2^n$ orthogonal sequences are four sequences numbered 0, 1, 2, and 3. 00 corresponds to the sequence 0, 01 corresponds to the sequence 1, 10 corresponds to the sequence {2}, and 11 corresponds to the sequence 3. In this case, the four sequences can carry 2-bit information.

It should be noted that for the sequence selection manner, different cyclic shifts are indicated by using different values of a in the sequence $\{f_n\}$. Optionally, a

may carry different pieces of information.

Optionally, in the sequence modulation manner, one sequence is allocated to one user, and a modulation symbol is generated for information that needs to be transmitted by the user. The modulation symbol includes but is not limited to a BPSK symbol, a QPSK symbol, an 8QAM symbol, a 16QAM symbol, and the like. The modulation symbol is multiplied by the sequence to generate an actual to-be-sent sequence. For example, one BPSK symbol may be 1 or -1. For one sequence $\{f_n\}$, a to-be-sent sequence may be $\{f_n\}$ or $\{-f_n\}$ after modulation is performed based on the BPSK symbol.

In a possible example, according to descriptions corresponding to FIG. 2 in the specification, after accessing the network, the terminal device may determine, based on A and the sequence $\{x_n\}$, the sequence $\{f_n\}$ that includes the N elements and that is configured by the network device.

It should be noted that for the sequence modulation manner, different pieces of information are carried by using different values of A in the sequence $\{f_n\}$.

Optionally, A may be a modulation symbol. In this case, A is obtained after a data information bit or a control information bit is modulated. A is carried on the N elements included in the sequence $\{f_n\}$, and A does not vary with n.

Optionally, A is a constant. For example, A=1. For example, A may be a symbol known to both the terminal device and the network device. Alternatively, A may indicate an amplitude.

It should be noted that, that A is a constant in a transmission time unit does not mean that A is fixed, and A may change when the first signal is sent at different moments. For example, all the N elements included in the sequence $\{f_n\}$ or the sequence $\{x_n\}$ are a reference signal, and A is an amplitude of the reference signal. When the terminal device sends the first signal for a first time, the terminal device may send the first signal based on A=1. When the terminal device sends the first signal for a second time, the terminal device may send the first signal based on A=2.

S103. The network device receives the first signal carried on the N subcarriers, to obtain the N elements in the sequence $\{f_n\}$.

It can be learned from S102 that the first signal is generated by respectively mapping the N elements in the sequence $\{f_n\}$ including the N elements to the N subcarriers. For detailed descriptions of the sequence $\{f_n\}$, refer to corresponding descriptions in S101 and S102. Details are not described herein again.

Optionally, during execution of S103, a process in which the network device receives the first signal carried on the N subcarriers is as follows: The time domain signal is obtained and the cyclic prefix is removed. Then M-point FFT is performed on a signal obtained after the cyclic prefix is removed, to obtain the N-point frequency domain signal, where M is greater than or equal to N. Then the terminal device receives the first signal carried on the N subcarriers. The first signal is the sequence $\{f_n\}$ including the N elements. For example, the receiving device receives the signal on the N subcarriers based on the locations that are of the N subcarriers in subcarriers in the communications system and that are predefined or are configured by a base station.

In specific implementation, after accessing the network, the terminal device sends a PUCCH by using the configured sequence $\{f_n\}$, and the network device receives the PUCCH by using the sequence $\{f_n\}$ configured for the terminal device.

S104. The network device processes the first signal based on the N elements in the sequence $\{f_n\}$.

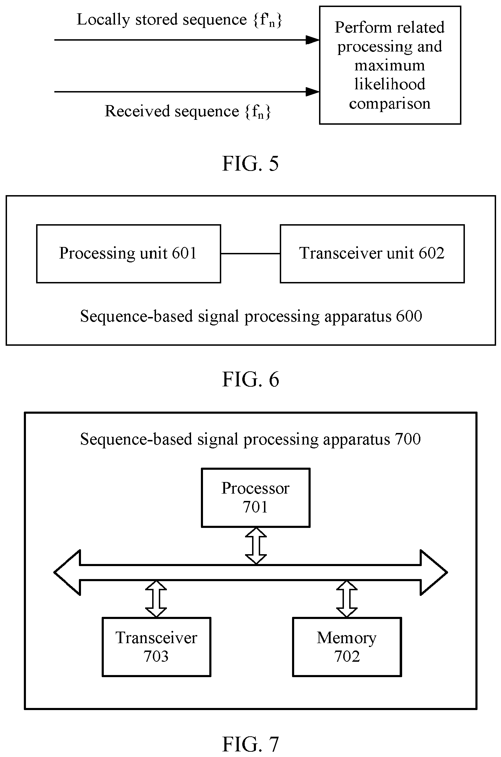

Optionally, FIG. 5 is a schematic diagram of a process in which the network device processes the first signal. The network device obtains all possible sequences by traversing a locally stored sequence $\{f'_n\}$, and separately performs related processing and maximum likelihood comparison on the obtained sequence $\{f_n\}$ and all the possible sequences of the sequence $\{f'_n\}$, to obtain data transmitted by the terminal device.

With reference to descriptions corresponding to S102 in the specification, a value combination of 2-bit information is $\{(0, 0), (0, 1), (1, 0), (1, 1)\}$. With reference to FIG. 2, when the two-bit information is (0, 0), the obtained sequence $\{f'_n\}$ is a sequence $\{f'_{1,n}\}$; when the two-bit information is (0, 1), the obtained sequence $\{f'_n\}$ is a sequence $\{f'_{2,n}\}$; when the two-bit information is (1, 0), the obtained sequence $\{f'_n\}$ is a sequence $\{f'_{3,n}\}$; and when the two-bit information is (1, 1), the obtained sequence $\{f'_n\}$ is a sequence $\{f'_{4,n}\}$. The four sequences $\{f'_{1,n}\}$, $\{f'_{2,n}\}$, $\{f'_{3,n}\}$, and $\{f'_{4,n}\}$ may be cyclic shift sequences of a same sequence, and the sequence $\{f_n\}$ is separately correlated to $\{f'_{1,n}\}$, $\{f'_{2,n}\}$, $\{f'_{3,n}\}$ and $\{f'_{4,n}\}$ to obtain four correlation values. A value of 2-bit information corresponding to a largest correlation value is the data obtained by the network device. For example, if the largest correlation value is obtained through a correlation between the sequences $\{f_n\}$ and $\{f'_{1,n}\}$, the 2-bit information is (0, 0).

According to the sequence-based signal processing method disclosed in this embodiment of this application, a sequence meeting a requirement for sending a signal by using a PUCCH is determined. The sequence is the sequence $\{f_n\}$ including the N elements, and $f_n$ is an element in the sequence $\{f_n\}$. The determined sequence $\{f_n\}$ is a sequence that meets the preset condition, and the preset condition is $f_n = A \cdot x_n \cdot e^{2\pi j \cdot a \cdot n}$, where the value of n ranges from 0 to N-1, A is a non-zero complex number, $a$ is a real number and indicates a cyclic shift of the signal, $j = \sqrt{-1}$, for the element $x_n$, $x_n = u \cdot e^{2\pi j \cdot s_n / M}$, M=12, and u is a non-zero complex number. The set that includes the sequence $\{s_n\}$ including the element $s_n$ includes at least one of the sequences in the first sequence set or at least one of the equivalent sequences of the sequences in the first sequence set, or at least one of sequences in a second sequence set or at least one of equivalent sequences of the sequences in the second sequence set. Then the N elements in the sequence $\{f_n\}$ are respectively mapped to the N subcarriers to generate and send the first signal. With the determined sequence, when the signal is sent by using the PUCCH, a low cross-correlation between sequences can be maintained, and a relatively small PAPR value and a relatively small CM value can be maintained. Therefore, a requirement in a communications application environment in which the signal is sent by using the PUCCH is met.

Further, according to the sequence-based signal processing method disclosed in this embodiment of this application, for the sequence $\{s_n\}$ related to the sequence $\{f_n\}$ including the N elements that is determined in S101, the set that includes the sequence $\{s_n\}$ including the element $s_n$ includes at least a first sequence in the second sequence set or an equivalent sequence of the first sequence, and a second sequence in the second sequence set or an equivalent sequence of the second sequence. In other words, the set that includes the sequence $\{s_n\}$ including the element $s_n$ includes at least two non-equivalent sequences in the sequences in the second sequence set and the equivalent sequences of the sequences in the second sequence set. To be specific, the set that includes the sequence $\{s_n\}$ including the element $s_n$ includes at least two sequences in the second sequence set, or the set that includes the sequence $\{s_n\}$ including the element $s_n$ includes at least one sequence in the second sequence set and one equivalent sequence of another sequence in the second sequence set, or the set that includes the sequence $\{s_n\}$ including the element $s_n$ includes at least one equivalent sequence of one sequence in the second sequence set and one equivalent sequence of another sequence in the second sequence set. Herein, when the sequences in the first sequence set and the second sequence set overlap, one of the first sequence and the second sequence may be a sequence in the first sequence set, or neither the first sequence nor the second sequence is a sequence in the first sequence set.

The second sequence set is one of the following sets: a sequence set 1, a sequence set 2, a sequence set 3, a sequence set 4, a sequence set 5, a sequence set 6, a sequence set 7, a sequence set 8, a sequence set 9, a sequence set 10, a sequence set 11, a sequence set 12, a sequence set 13, and a sequence set 14. The sequence $\{s_n\}$ including the element $s_n$ is equivalent to the sequence $\{s_n\}$. A cross-correlation between $\{f_n\}$ determined based on sequences in each sequence set is relatively low. Therefore, if sequences include at least two non-equivalent sequences in sequences in a sequence set or at least two non-equivalent sequences in equivalent sequences of the sequences in the sequence set, it can be ensured that a correlation between the sequences is relatively low. In addition, a cross-correlation between an LTE sequence and a sequence in sequence sets 1 to 6 is relatively low, so that interference is reduced when an LTE system and a 5G system coexist.

Peak-to-average ratios of sequences $\{f_n\}$ corresponding to the sequences in the second sequence set are all less than 2.5 dB.

The sequence set 1 (which is marked as sh1_lte) includes some or all of the following 30 sequences, and PAPRs of sequences corresponding to the sequences are less than 2.1 dB. The 30 sequences are as follows:
{6, 2, -3, -3, 3, -3, 1, 2, 4, 0, 0, 0}; {1, -4, 2, -3, -1, -2, -3, 0, 5, 6, 0, 0}; {5, -5, 0, 6, 3, -5, 5, -4, 6, 5, 0, 0}; {2, 1, 3, -4, 5, -2, 5, 0, 1, 5, 0, 0}; {-3, 2, 2, 6, -1, -5, 3, 3, 0, 3, 0, 0}; {-1, -3, 6, 0, 3, -1, 2, 3, 3, -4, 0, 0}; {-2, 2, 6, 6, -1, 5, 0, -1, -4, 1, 0, 0}; {-4, 4, 3, -2, 1, 5, -1, -4, -1, -2, 0, 0}; {-1, 2, -4, 2, -4, -4, -1, -2, 4, 2, 0, 0}; {3, -3, 0, 6, 5, 1, 4, 1, -3, -2, 0, 0}; {1, 4, -1, -3, -1, -4, 5, -2, -2, -5, 0, 0}; {-3, 5, -3, 4, -2, -4, 6, 4, -5, -4, 0, 0}; {-4, -5, 2, 1, 6, -3, 3, -3, 1, -1, 0, 0}; {4, -4, -3, 3, -3, 5, -4, -5, -5, 4, 0, 0}; {3, 6, -1, 5, 0, -2, 0, -2, -4, -5, 0, 0}; {5, 2, -2, 3, 1, 1, -4, -2, 5, -3, 0, 0}; {3, 0, -3, 3, -3, -1, -3, 5, -4, -1, 0, 0}; {3, 5, 0, 3, -4, 4, 2, -5, 5, -1, 0, 0}; {4, 2, -4, 4, 1, 5, -4, 4, 6, 0, 0, 0}; {2, -4, -5, 1, 1, -5, 2, 6, 1, 1, 0, 0}; {6, 1, 0, -2, 3, -5, -2, -3, 2, -2, 0, 0}; {-2, 1, 0, 3, -3, -1, 5, -2, -5, 4, 0, 0}; {-3, 1, -4, 3, 6, -2, -3, 5, 1, -1, 0, 0}; {2, -3, 4, -4, -5, 6, -1, -1, 3, 5, 0, 0}; {1, -4, 1, 0, 2, -2, 2, 5, -5, 4, 0, 0}; {-3, 1, -5, -2, -2, 3, -1, 6, 5, 1, 0, 0}; {5, 1, -4, 2, -4, -1, 1, 0, 3, 4, 0, 0}; {2, -4, 0, -2, 6, 6, 1, -4, -2, 0, 0, 0}; {-3, 6, -2, -5, -4, 2, -2, 1, 4, 6, 0, 0}; and {-1, 6, 2, -2, 3, -4, 0, 3, 3, 3, 0, 0}.

The sequence set 2 (which is marked as sh2_lte) includes some or all of the following sequences, and PAPRs of sequences corresponding to the sequences are less than 2.2 dB. The sequences are as follows:
{6, 2, -3, -3, 3, -3, 1, 2, 4, 0, 0, 0}; {6, 0, -5, 1, 0, 2, 0, 0, 5, 5, 0, 0}; {6, -3, 1, -5, -2, -5, 3, -4, 6, 1, 0, 0}; {-4, 2, 2, -4, 6, -1, 4, -1, 0, 0, 0, 0}; {-3, -5, -1, -5, 4, 3, -3, -1, 5, -2, 0, 0}; {-5, -2, 4, 4, -2, 3, 0, -2, -4, 0, 0, 0}; {-2, -3, 5, -1, -2, 3, -4, 3, -5, 0, 0, 0}; {4, 2, -4, 2, 5, 1, 6, 5, 5, 6, 0, 0}; {-2, -1, 1, -5, 3, 6, 2, 0, -1, 6, 0, 0}; {5, -4, 1, 6, 1, -1, 1, 0, 6, 3, 0, 0}; {-3, 5, 4, 3, -3, 2, 5, -5, 0, -3, 0, 0}; {0, 2, 5, -2, 5, 3, 3, -3, 4, 0, 0, 0}; {4, -1, 4, 4, -1, 0, -4, 5, -2, 0, 0, 0};
{6, 1, -5, 4, 4, -1, 3, -5, -4, 0, 0, 0}; {4, -1, 1, -2, 6, -3, -5, -1, -1, -5, 0, 0}; {3, -3, 2, 4, -3, 5, 3, 4, -1, -2, 0, 0}; {-3, 1, -1, 1, 5, 1, -3, 5, 3, 4, 0, 0}; {-5, 6, -3, -5, 3, -1, 2, -2, 3, 6, 0, 0}; {-3, 1, -3, 6, -4, 6, 5, -1, -5, -4, 0, 0}; {6, -2, -2, 2, 3, -2, 3, -3, 3, 2, 0, 0}; {-1, -5, 4, -4, 3, 5, 0, 6, -5, -1, 0, 0}; {-2, -3, 2, 6, 1, -5, -3, 3, 1, -2, 0, 0}; {-3, -5, 0, -2, 2, 4, -3, 2, 5, 2, 0, 0}; {4, -5, -5, -1, 4, -1, 2, 0, -2, 5, 0, 0}; {2, -1, -5, 2, 6, 3, 2, 2, -5, -2, 0, 0}; {3, 0, -5, 0, -5, -2, 1, 0, 3, 4, 0, 0}; {-1, 4, 1, -5, -3, 3, 4, -1, 0, -2, 0, 0}; {-5, 5, -3, 6, -4, 1, -3, 1, 4, 6, 0, 0}; {-5, 4, -2, 2, -3, -1, 3, 3, -1, -2, 0, 0}; and {0, 4, 0, -4, 2, -2, -2, 6, -4, 0, 0, 0}.

The sequence set 3 (which is marked as sh5_lte) includes some or all of the following sequences, and PAPRs of sequences corresponding to the sequences are less than 2.5 dB. The sequences are as follows:
{6, 2, -3, -3, 3, -3, 1, 2, 4, 0, 0, 0}; {4, 5, 6, -2, 3, -1, 4, -1, -2, 4, 0, 0}; {2, -5, 3, -4, 3, 3, 6, -5, 4, 5, 0, 0}; {5, 1, 1, 6, -1, 2, -2, -5, -3, 0, 0, 0}; {0, 4, 4, 2, 2, -3, -1, 4, -2, -5, 0, 0}; {-5, 4, 0, -5, -5, 5, -5, 2, 5, -2, 0, 0}; {6, -4, 2, -4, -1, 4, 1, -5, 3, 0, 0, 0}; {-3, 5, -4, 2, 2, -2, 2, -1, -4, -3, 0, 0}; {-2, -3, 3, 1, -4, -3, 4, -4, 2, -2, 0, 0}; {3, -1,-3, 1, 2, 5, 3, -5, 1, 4, 0, 0}; {-1, 4, -4, -5, 1, 4, 2, -1, -3, 2, 0, 0}; {-3, 3, 5, 0, -4, 1, -2, -4, -3, -4, 0, 0}; {2, -4, 2, 1, 6, 4, -5, -1, 3, 1, 0, 0}; {3, -3, -4, -1, 3, -2, -5, -5, -1, 4, 0, 0}; {-5, 2, 6, 3, 4, 6, -1, 0, -3, 6, 0, 0}; {6, 6, -3, -5, 3, -2, 2, -4, 3, 5, 0, 0}; {4,-5, 0, -5, -4, 0, 2, 1, 5, 1, 0, 0}; {3, -2, 2, 5, 5, 5, 6, 1, 6, 4, 0, 0}; {0, 1, 6, -1, 6, 3, 4, -1, -2, 2, 0, 0}; {-3, -5, -2, -4, 4, -4, 1, 6, -4, 6, 0, 0}; {-3, -1, 6, -2, 3, 1, 0, 5, 3, -2, 0, 0}; {3, -5, 3, -1, -5, 6, 2, 5, -2, 0, 0, 0}; {3, 6, 2, 5, -5, 2, -2, 5, 5, 5, 0, 0}; {-4, 5, -2, 0, 6, -4, 5, 2, -3, 0, 0, 0}; {1, 3, 2, 6, 0, -5, -1, -1, 5, 3, 0, 0}; {4, -5, 4, -2, -2, 3, -2, 1, 4, 3, 0, 0}; {-1, -1, -3, 1, -5, 4, 1, -1, 5, -3, 0, 0}; {-3, 4, -3, 1, 5, 2, -1, 0, -2, -4, 0, 0}; {-5, 4, 6, 4, -3, 0, -4, 2, 2, -4, 0, 0}; and {3, -1, 5, -5, 6, -1, 2, 1, 0, 4, 0, 0}.

The sequence set 4 (which is marked as seq_out22_l{10}) includes some or all of the following sequences, and PAPRs of sequences corresponding to the sequences are less than 2.2 dB. The sequences are as follows:
{0, -2, 4, 2, -4, -3, -4, -4, -4, 2, -5, -1 }; {-2, -2, -5, 6, 0, 5, -1, 4, -3, -3, 0, 0}; {-1, 6, 0, -4, -4, 2, 6, -4, -2, 1, 0, 0}; {-2, 2, -2, 1, 5, -2, -2, 6, 4, -1, 0, 0}; {-4, 0, -1, 6, 0, 1, -5, 3, 5, 1, 0, 0}; {6, 5, 1, -5, -5, 0, 5, 1, 6, -1, 0, 0}; {3, -4, 3, -4, 5, 5, 2, 2, -4, -3, 0, 0}; {5, -1, 6, 6, 5, 2, -5, 4, 6, -4, 0, 0}; {-4, 1, -5, 4, -4, -5, -4, -2, 5, 4, 0, 0}; {-1, 5, -4, 6, 1, 6, 4, -4, -3, 3, 0, 0}; {1, -5, 2, 1, 5, 0, 1, -3, -5, -4, 0, 0}; {-5, 2, 6, -5, -4, -2, 4, -3, 5, 3, 0, 0}; {0, 0, 1, 6, 3, -1, 4, 6, 1, 5, 0, 0}; {-4, -5, 0, -2, -4, -3, 3, 6, 2, -5, 0, 0}; {5, 1, 2, 6, 0, 2, -2, 6, -3, -4, 0, 0}; {3, -3, 2, 4, -3, 5, 3, 4, -1, -2, 0, 0}; {-4, -1, -5, 1, 0, 5, 0, 3, 5, 4, 0, 0}; {6, -3, -2, 3, -3, 4, -3, -2, 6, 2, 0, 0}; {-2, -3, 2, 6, 1, -5, -3, 3, 1, -2, 0, 0}; {-3, 6, 1, -5, 1, 1, -1, 2, 5, -1, 0, 0}; {6, 1, -3, 3, -4, 0, 4, 6, 6, 5, 0, 0}; {-5, 1, -4, -5, -1, 5, -5, -5, -4, 2, 0, 0}; {4, 2, 6, 4, 6, 0, -4, 0, 3, 6, 0, 0}; {-5, -1, 0, 4, -2, 5, 2, 2, -2, 2, 0, 0}; {6, 3, -1, 5, -5, 3, 6, 5, 5, -2, 0, 0}; {1, -1, -5, 2, -4, -3, -2, 4, -4, 0, 0, 0}; {-1, 0, 3, 1, 0, -5, -2, 5, 1, 6, 0, 0}; {-3, 0, 6, 5, 0, 2, -4, 4, -1, -1, 0, 0}; {-4, -1, -4, 1, -3, 2, 3, -3, 4, 3, 0, 0}; and {0, -4, -5, 1, -5, -2, 5, -4, -5, -1, 0, 0}.

The sequence set 5 (which is marked as seq_out25_l{1}) includes some or all of the following sequences, and PAPRs of these sequences are less than 2.5 dB. The sequences are as follows:

{0, 0, 8, 7, 6, 0, 6, 4, 9, 5, 7, 10}; {0, 0, 5, 2, 1, 2, 1, 9, 6, 10, 3, 8}; {0, 0, 1, 3, 11, 7, 11, 4, 5, 0, 0, 7}; {0, 0, 10, 5, 5, 10, 3, 9, 10, 10, 2, 9}; {0, 0, 3, 4, 11, 1, 7, 10, 5, 11, 6, 3}; {0, 0, 4, 8, 6, 2, 2, 11, 3, 4, 0, 5}; {0, 0, 2, 10, 4, 0, 11, 9, 6, 0, 3, 5}; {0, 0, 9, 2, 3, 1, 9, 1, 10, 5, 6, 9}; {0, 0, 7, 11, 5, 3, 6, 3, 0, 0, 4, 3}; {0, 0, 8, 8, 0, 10, 8, 2, 7, 2, 9, 0}; {0, 0, 4, 10, 2, 4, 7, 6, 10, 7, 5, 3}; {0, 0, 5, 2, 1, 5, 2, 5, 0, 10, 0, 7}; {0, 0, 3, 3, 7, 1, 5, 3, 1, 11, 7, 11}; {0, 0, 9, 5, 11, 11, 0, 4, 8, 3, 6, 7}; {0, 0, 2, 11, 10, 4, 6, 9, 3, 8, 2, 9}; {0, 0, 9, 0, 5, 10, 10, 10, 3, 11, 5, 3}; {0, 0, 9, 8, 2, 5, 0, 6, 7, 11, 9, 2}; {0, 0, 1, 10, 1, 8, 11, 3, 2, 8, 7, 2}; {0, 0, 1, 6, 11, 3, 10, 7, 4, 11, 2, 1}; {0, 0, 11, 7, 8, 4, 11, 10, 2, 2, 9, 2}; {0, 0, 4, 8, 10, 3, 11, 4, 2, 2, 11, 6}; {0, 0, 6, 7, 5, 5, 0, 4, 6, 3, 10, 4}; {0, 0, 2, 7, 6, 4, 11, 8, 5, 9, 4, 7}; {0, 0, 7, 11, 10, 11, 4, 3, 7, 0, 8, 8}; {0, 0, 1, 5, 9, 2, 10, 3, 0, 8, 4, 4}; {0, 0, 0, 1, 10, 8, 5, 0, 4, 9, 10, 2}; {0, 0, 9, 5, 10, 0, 5, 1, 6, 6, 8, 4}; {0, 0, 11, 4, 1, 7, 8, 1, 3, 9, 0, 9}; {0, 0, 1, 9, 0, 1, 6, 1, 8, 8, 5, 0}; and {0, 0, 8, 10, 0, 7, 2, 0, 4, 8, 6, 9}.

The sequence set 6 (which is marked as seq_out25_l{2}) includes some or all of the following sequences, and PAPRs of these sequences are less than 2.5 dB. The sequences are as follows:

{0, 0, 8, 4, 6, 1, 9, 1, 1, 8, 0, 0}; {0, 0, 1, 9, 2, 5, 4, 8, 5, 1, 0, 6}; {0, 0, 10, 1, 8, 1, 4, 5, 10, 10, 4, 1}; {0, 0, 3, 6, 5, 2, 7, 4, 3, 1, 7, 0}; {0, 0, 2, 11, 11, 5, 6, 2, 5, 10, 6, 1}; {0, 0, 3, 3, 11, 8, 5, 7, 3, 6, 11, 4}; {0, 0, 8, 11, 9, 4, 11, 2, 6, 5, 5, 10}; {0, 0, 11, 6, 1, 0, 4, 7, 10, 5, 8, 4}; {0, 0, 6, 10, 2, 1, 4, 0, 8, 8, 11, 8}; {0, 0, 10, 11, 0, 2, 6, 10, 8, 3, 10, 3}; {0, 0, 9, 3, 10, 3, 4, 1, 4, 9, 10, 1}; {0, 0, 7, 5, 0, 9, 2, 9, 3, 6, 4, 5}; {0, 0, 0, 4, 8, 11, 9, 6, 10, 5, 0, 11}; {0, 0, 11, 9, 4, 9, 3, 9, 3, 4, 8, 8}; {0, 0, 8, 3, 3, 2, 4, 10, 2, 0, 8, 0}; {0, 0, 3, 8, 2, 2, 9, 7, 6, 2, 6, 3}; {0, 0, 4, 11, 11, 0, 11, 9, 3, 5, 2, 8}; {0, 0, 6, 5, 8, 6, 6, 8, 1, 6, 11, 7}; {0, 0, 6, 9, 6, 10, 5, 9, 8, 1, 11, 9}; {0, 0, 11, 1, 3, 9, 8, 5, 1, 6, 0, 8}; {0, 0, 7, 8, 2, 1, 9, 4, 9, 7, 8, 10}; {0, 0, 2, 0, 8, 9, 6, 10, 3, 9, 9, 2}; {0, 0, 4, 0, 6, 1, 9, 7, 6, 2, 5, 8}; {0, 0, 10, 7, 3, 8, 3, 7, 6, 8, 11, 4}; {0, 0, 10, 2, 3, 8, 9, 10, 6, 1, 7, 0}; {0, 0, 7, 6, 9, 3, 3, 1, 3, 5, 1, 5}; {0, 0, 4, 1, 8, 3, 5, 3, 2, 9, 11, 4}; {0, 0, 6, 9, 11, 3, 11, 3, 0, 1, 9, 4}; {0, 0, 3, 8, 10, 7, 4, 3, 8, 4, 8, 6}; and {0, 0, 8, 8, 2, 8, 3, 10, 2, 0, 2, 4}.

The sequence set 7 (which is marked as seq_out20{2}) includes some or all of the following sequences, and PAPRs of these sequences are less than 2.0 dB. The sequences are as follows:

{0, 4, -4, -2, 4, 3, 0, -4, -2, -4, -1, -3}; {-4, -1, 0, 5, -1, 6, -2, -2, -5, 3, 0, 0}; {-5, 5, -1, 1, -2, 3, -4, 1, 1, -3, 0, 0}; {-4, 2, -5, 3, 4, 6, 0, 0, -3, -5, 0, 0}; {-1, 5, 0, -5, 3, 2, 2, -5, -2, 1, 0, 0}; {-5, 0, -5, 1, 3, -4, -4, 2, 1, 0, 0, 0}; {1, -3, 0, -4, 1, -2, -4, 4, -5, -3, 0, 0}; {-1, -3, 6, 0, 3, -1, 2, 3, 3, -4, 0, 0}; {1, 3, -3, 4, 6, -3, 2, 0, 5, 1, 0, 0}; {-2, 2, 6, 6, -1, 5, 0, -1, -4, 1, 0, 0}; {2, -4, 3, -5, -5, 5, -2, 0, 4, 4, 0, 0}; {3, 3, 0, 1, -5, 0, 6, 2, -4, -4, 0, 0}; {5, 3, -1, 4, 4, -1, 4, -5, 5, -2, 0, 0}; {3, 3, -5, -5, 1, -3, 3, -4, 2, 3, 0, 0}; {-2, 4, 5, 1, -2, 4, 4, -4, 1, -1, 0, 0}; {5, 1, 0, 5, -2, 2, -3, 6, -2, 0, 0, 0}; {-5, -1, 6, 0, 6, 6, -4, -4, 6, 5, 0, 0}; {3, 2, 4, -3, 6, -1, 5, 0, 1, 5, 0, 0}; {-5, 1, -5, 6, -1, 5, -5, 6, -5, 1, 0, 0}; {2, -1, 4, -1, 6, 5, 1, 2, -4, -1, 0, 0}; {3, -3, 0, 6, 5, 1, 5, 2, -3, -2, 0, 0}; {2, -4, -5, -1, 2, -4, -4, 4, -1, 1, 0, 0}; {-1, 3, -5, 1, -4, -3, -3, 4, 1, -2, 0, 0}; {-4, 1, 0, 5, 1, 4, -2, 4, 4, 1, 0, 0}; {-5, -2, 4, -5, -1, -5, 4, -4, 6, 0, 0, 0}; {-2, 4, -4, 3, -4, -5, -1, -1, 3, 3, 0, 0}; {1, -3, 1, -4, 0, -3, -3, 0, 6, 6, 0, 0}; {2, -2, 5, 1, 2, -3, 1, 6, -4, -1, 0, 0}; {1, -5, 1, -3, -5, -1, -1, 6, -5, 1, 0, 0}; and {4, 6, -4, 4, -3, 6, 0, 6, 6, 3, 0, 0}.

The sequence set 8 (which is marked as seq_out21 {5}) includes some or all of the following sequences, and PAPRs of these sequences are less than 2.1 dB. The sequences are as follows:

{0, -3, -5, 2, -3, 1, -2, -1, -1, 2, 6, -4}; {-5, 3, 5, 0, 5, 1, -1, 6, -4, -2, 0, 0}; {0, -2, 6, 0, -1, 3, -4, 3, -5, 0, 0, 0}; {-3, 0, 5, 0, -5, -3, -5, 3, 0, -2, 0, 0}; {-2, 4, 4, 1, -2, 3, 4, -4, 1, -2, 0, 0}; {-3, 0, 5, 2, -5, 3, -1, -2, 2, 2, 0, 0}; {5, -3, -1, 1, -2, 5, 2, 3, 0, 4, 0, 0}; {1, 6, 0, -5, 4, -2, 0, 3, 3, 3, 0, 0}; {5, 0, 0, 5, -4, 3, 5, 1, -3, 0, 0, 0}; {0, 5, -4, -4, 1, 6, 1, -2, -3, 2, 0, 0}; {-3, -3, 5, -2, -1, -5, 1, 5, 3, -3, 0, 0}; {1, 6, 2, -4, -2, 0, -2, -1, 4, 3, 0, 0}; {-1, -4, 0, -4, -1, -1, 3, -5, -4, 4, 0, 0}; {3, 1, -4, -2, -4, 1, 6, -1, 0, -4, 0, 0}; {6, 0, 5, -3, 5, 5, 5, 3, -3, -4, 0, 0}; {-4, -1, 2, -4, 6, -2, -4, -5, -4, 3, 0, 0}; {6, 6, -2, -3, 4, -2, 5, -3, 3, 3, 0, 0}; {-3, 1, 1, 6, 3, -1, 4, 6, 3, 2, 0, 0}; {-5, 4, -1, 6, -3, 6, 5, 3, -5, -2, 0, 0}; {-4, 2, 6, 3, 4, 6, -1, 0, -3, 6, 0, 0}; {4, -2, 6, -3, -4, 6, 1, 0, 3, 6, 0, 0}; {-2, -5, 5, -4, 4, 6, 1, 6, -4, -4, 0, 0}; {4, -5, 4, -3, 2, 4, -2, -4, 4, 0, 0, 0}; {-4, -5, 0, -2, -4, -3, 3, 6, 2, -5, 0, 0}; {-4, 4, -1, 3, -2, 1, 3, 2, 4, 5, 0, 0}; {6, -1, 0, 6, 5, -4, 2, -3, 1, 0, 0, 0}; {-4, 2, -5, 2, -3, 6, 5, -2, 0, 2, 0, 0}; {0, 3, 1, 5, -2, 3, 4, -3, 5, 2, 0, 0}; {-5, 4, 5, -1, 6, -5, 1, 5, 5, -2, 0, 0}; and {0, -1, 3, 5, 4, -1, 4, 5, 0, 4, 0, 0}.

The sequence set 9 (which is marked as seq_out22{21}) includes some or all of the following sequences, and PAPRs of these sequences are less than 2.2 dB. The sequences are as follows:

{0, 4, 0, -2, 1, -2, -4, 1, 2, 0, 5, -5}; {1, 4, -1, 4, -3, -3, 0, -2, 6, 2, 0, 0}; {0, -5, -1, 4, 4, 0, 3, 1, -3, -3, 0, 0}; {1, 6, -3, -4, 2, 6, 2, -1, -2, 2, 0, 0}; {5, 3, 1, 5, 1, 3, -2, 5, 6, -3, 0, 0}; {2, -2, 3, -2, 4, 5, 2, 2, 5, 5, 0, 0}; {4, -5, 0, 4, 2, 6, 3, -4, 6, 4, 0, 0}; {3, -2, 5, -2, 0, -2, -3, 3, 3, -2, 0, 0}; {-1, 6, 3, 1, 6, -1, -2, 0, -5, -1, 0, 0}; {-1, 2, -4, 2, -4, 6, 1, 2, -2, -2, 0, 0}; {-5, 3, 2, 5, 3, 0, 4, -3, 5, -4, 0, 0}; {1, 0, -3, -4, 1, 5, -2, 5, -2, -3, 0, 0}; {-4, 0, 0, 6, 0, -5, -2, -4, -4, 5, 0, 0}; {6, 4, -3, 2, -2, 5, 5, -2, 0, 3, 0, 0}; {-4, 6, -2, -3, 1, -5, 0, 3, 6, 3, 0, 0}; {-4, 2, 1, -4, -2, 3, -3, 6, -2, 0, 0, 0}; {4, -2, 6, -3, -4, 6, 1, 0, 3, 6, 0, 0}; {6, -3, 6, -3, 3, 6, -5, -1, -5, 4, 0, 0}; {-5, 6, -3, -5, 3, -1, 2, -2, 3, 6, 0, 0}; {4, 0, 6, -5, 4, -5, -1, 4, 3, -2, 0, 0}; {-5, 2, 6, -5, -4, 2, 4, -3, 5, 3, 0, 0}; {-3, 1, 5, 0, -5, -3, -4, 3, 0, -2, 0, 0}; {0, 5, -5, -2, -1, -3, -4, 3, -3, 3, 0, 0}; {6, 3, 4, 0, 6, 4, -2, 4, 6, -2, 0, 0}; {-5, -4, 6, 3, 6, -1, 5, 5, -2, -5, 0, 0}; {-3, 2, -5, 0, -1, -3, -5, 5, -3, -4, 0, 0}; {4, 2, -5, 0, -3, 6, 0, 2, -4, 0, 0, 0}; {-1, 6, 5, 4, -2, 1, -2, 0, 1, -4, 0, 0}; {-4, 0, 5, 2, -3, -4, 4, -2, 1, 1, 0, 0}; and {-5, 6, 1,0, 2,-1,4,-1,2,-5, 0,0}.

The sequence set 10 (which is marked as sh1) includes some or all of the following sequences, and PAPRs of these sequences are less than 2.1 dB. The sequences are as follows:

{6, 0, 6, 0, 4, -5, -4, 2, 0, -2, 0, 0}; {2, -4, 3, -5, -5, 5, -1, 0, 3, 4, 0, 0}; {-4, 0, 4, 3, -2, 3, -1, -2, -5, 0, 0, 0}; {0, 4, -2, 4, -3, -4, -1, -2, 6, 5, 0, 0}; {3, 0, 4, -2, 0, 6, 0, -3, -5, -3, 0, 0}; {-1, 0, 3, 4, -1, -5, 2, -5, 2, 3, 0, 0}; {-1, -1, 1, -4, 6, -3, 3, -2, -1, 5, 0, 0}; {-1, 6, -4, 2, -5, 3, 0, -4, -3, -2, 0, 0}; {6, 3, -1, 5, -1, 0, -1, 6, -3, 0, 0, 0}; {3, -2, 3, 2, -3, 2, 4, 5, -5, 1, 0, 0}; {-5, 0, 0, -5, 4, -3, -5, -1, 3, 0, 0, 0}; {3, -3, 5, 2, 2, -3, 1, -5, -3, -1, 0, 0}; {-2, -3, 2, -1, 3, 4, -3, 2, 5, 2, 0, 0}; {-2, 3, -4, 4, 5, 6, 1, 1, -3, -5, 0, 0}; {2, 1, -4, 2, 3, -3, 3, 6, 4, -2, 0, 0}; {-4, 0, 2, -3, 3, 0, 4, 6, 3, 1, 0, 0}; {0, 3, 1, 5, -2, 3, 4, -3, 5, 2, 0, 0}; {1, -2, -5, 0, 5, 0, 3, 2, 4, 6, 0, 0}; {-5, 3, -2, 1, -4, -1, 3, 3, -1, -2, 0, 0}; {-4, 3, -5, -1, -5, -4, 6, 4, -5, -5, 0, 0}; {-4, -1, 2, -4, 6, -2, -4, -5, -4, 3, 0, 0}; {2, -4, -4, -1, 2, -3, -4, 4, -1, 2, 0, 0}; {-1, -1, 4, -5, -4, 3, -2, 1, -3, 2, 0, 0}; f 4, 0, -4, 2, 1, 4, -4, 3, 5, 0, 0, 0}; {4, -5, 4, -3, 2, 4, -2, -4, 4, 0, 0, 0}; {-2, -5, 0, -4, 6, 5, -4, -1, 5, -3, 0, 0}; f 0, -4, -3, 4, -2, -5, 1, 6, -5, -1, 0, 0}; {-5, -1, -5, -2, 4, -1, -4, 4, 5, 6, 0, 0}; {-4, 3, -1, 0, 6, 6, -1, 3, -1, -1, 0, 0}; and {-1, 1, 2, -2, 2, -1, 3, -3, 6, 5, 0, 0}.

The sequence set 11 (which is marked as sh2) includes some or all of the following sequences, and PAPRs of sequences corresponding to the sequences are less than 2.2 dB. The sequences are as follows:

{6, 0, 6, 0, 4, -5, -4, 2, 0, -2, 0, 0}; {-2, 1, -4, -4, 4, -4, 3, -1, -4, -2, 0, 0}; {5, 2, 4, -1, 5, 6, 1, 5, 5, -3, 0, 0}; {3, 3, 0, 5, -5, 4, -3, 2, 1, 6, 0, 0}; {-5, 1, 6, 0, -4, 5, 5, -3, 0, 1, 0, 0}; {-1, 4, 2, -3, -4, 0, 6, -2, 2, 0, 0, 0}; {-4, 6, 1, 2, -4, 4, -3, -1, 2, -1, 0, 0}; {3, 6, -1, -2, 3, -5, 3, 1, -2, 2, 0, 0}; {0, 0, 1, 6, 3, -1, 4, 6, 1, 5, 0, 0}; {5, -1, 5, -2, 0, 0, -1, 0, -4, 6, 0, 0}; {-4, 1, 6, 1, -2, 6, 0, 2, 4, 3, 0, 0}; {-5, -5, -5, 2, 6, -2, 6, 4, -3, 6, 0, 0}; {1, -3, 1, 6, 6, -3, 1, 0, -2, 3, 0, 0}; {0, -3, -1, -5, 2, -3, -4, 3, -5, -2, 0, 0}; {-5, 2, -4, -2, 1, 3, -3, 5, 1, 1, 0, 0}; {0, 3, 1, 5, -2, 3, 4, -3, 5, 2, 0, 0}; {-1, 6, -2, 1, -3, -2, -5, 4, -5, -5, 0, 0}; {2, -2, -3, -5, 0, 5, -4, -4, 1, -3, 0, 0}; {1, -4, 2, 6, -4, 3, 1, 0, -2, -3, 0, 0}; {2, 4, -5, 1, 5, 0, -5, 5, 3, -1, 0, 0}; {-3, -1, 6, -3, 1, 0, 4, 2, -5, 3, 0, 0}; {3, -5, -4, -3, 3, -2, -5, 5, 0, 3, 0, 0}; {5, 4, 0, -5, 3, -4, 2, 5, -4, 0, 0, 0}; {-1, 0, 6, -3, 6, -2, 6, -1, -4, 6, 0, 0}; {3, -3, -1, 5, 5, 1, 5, 1, -3, -1, 0, 0}; {4, 1, 6, 5, -3, 5, -2, 2, 5, 2, 0, 0}; {0, 0, -5, -1, 6, -4, 1, -3, 6, -1, 0, 0}; {-2, -4, 6, 0, 5, -3, -5, 3, -4, -1, 0, 0}; {2, -2, 3, -1, 6, 5, 1, 2, -4, -1, 0, 0}; and {-3, 1, -3, 6, -4, 6, 5, -1, -5, -4, 0, 0}.

The sequence set 12 (which is marked as seq_out21_I{1}) includes some or all of the following sequences, and PAPRs of sequences corresponding to the sequences are less than 2.1 dB. The sequences are as follows:

{0, 0, 11, 6, 7, 7, 10, 4, 9, 9, 3, 10}; {0, 0, 7, 4, 9, 6, 3, 3, 4, 9, 3, 6}; {0, 0, 2, 5, 1, 2, 10, 10, 6, 1, 7, 4}; {0, 0, 1, 3, 3, 9, 6, 2, 4, 11, 2, 9}; {0, 0, 10, 0, 7, 11, 7, 4, 11, 11, 2, 5}; {0, 0, 7, 8, 10, 9, 11, 2, 9, 1, 8, 4}; {0, 0, 11, 8, 9, 3, 9, 0, 9, 2, 1, 6}; {0, 0, 11, 4, 1, 0, 7, 1, 6, 6, 10, 2}; {0, 0, 4, 8, 8, 3, 9, 0, 7, 1, 10, 10}; {0, 0, 10, 11, 2, 7, 8, 2, 10, 2, 8, 4}; {0, 0, 3, 1, 11, 6, 7, 1, 4, 11, 7, 11}; {0, 0, 6, 6, 1, 3, 4, 4, 5, 0, 6, 0}; {0, 0, 8, 4, 4, 9, 3, 0, 5, 11, 2, 2}; {0, 0, 5, 4, 2, 0, 2, 0, 7, 1, 6, 9}; {0, 0, 1, 4, 7, 3, 1, 3, 9, 3, 0, 9}; {0, 0, 8, 6, 9, 3, 11, 3, 4, 0, 4, 5}; {0, 0, 0, 0, 3, 6, 0, 10, 6, 3, 8, 1}; {0, 0, 3, 1, 10, 11, 8, 2, 6, 1, 2, 7}; {0, 0, 3, 7, 1, 4, 7, 6, 4, 0, 5, 2}; {0, 0, 8, 5, 7, 10, 2, 10, 0, 11, 4, 11}; {0, 0, 3, 6, 10, 8, 8, 3, 11, 9, 0, 8}; {0, 0, 3, 0, 9, 4, 3, 3, 9, 1, 8, 0}; {0, 0, 2, 5, 3, 1, 5, 0, 0, 9, 3, 8}; {0, 0, 6, 5, 3, 5, 1, 5, 1, 8, 1, 2}; {0, 0, 11, 6, 5, 0, 8, 1, 0, 4, 10, 1}; {0, 0, 7, 7, 11, 8, 7, 1, 7, 0, 9, 0}; {0, 0, 11, 9, 4, 4, 6, 9, 5, 11, 4, 7}; {0, 0, 9, 1, 3, 9, 9, 9, 3, 0, 5, 0}; {0, 0, 6, 8, 1, 3, 1, 4, 9, 5, 11, 8}; and {0, 0, 7, 8, 8, 6, 2, 9, 6, 10, 3, 9}.

The sequence set 13 (which is marked as seq_out20_I{9}) includes some or all of the following sequences, and PAPRs of sequences corresponding to the sequences are less than 2.0 dB. The sequences are as follows:

{0, 0, 0, 5, 3, 2, 11, 4, 10, 10, 3, 8}; {0, 0, 8, 7, 6, 8, 11, 2, 8, 3, 11, 4}; {0, 0, 11, 8, 5, 9, 11, 9, 3, 9, 0, 3}; {0, 0, 3, 5, 8, 4, 2, 11, 4, 0, 3, 11}; {0, 0, 4, 7, 7, 1, 7, 10, 5, 10, 8, 7}; {0, 0, 4, 0, 1, 6, 11, 4, 2, 4, 11, 9}; {0, 0, 0, 3, 6, 1, 0, 1, 7, 1, 9, 6}; {0, 0, 2, 3, 10, 7, 11, 7, 6, 0, 3, 9}; {0, 0, 9, 10, 4, 9, 3, 11, 5, 5, 9, 9}; {0, 0, 0, 3, 9, 10, 8, 2, 6, 2, 11, 6}; {0, 0, 4, 1, 11, 7, 8, 1, 5, 0, 8, 11}; {0, 0, 1, 0, 4, 0, 8, 8, 3, 3, 8, 0}; {0, 0, 7, 6, 7, 7, 4, 10, 8, 1, 6, 11}; {0, 0, 2, 7, 1, 3, 10, 10, 6, 2, 7, 5}; {0, 0, 11, 7, 0, 10, 3, 6, 8, 3, 9, 11}; {0, 0, 7, 8, 11, 10, 11, 2, 8, 2, 8, 4}; {0, 0, 1, 0, 7, 11, 11, 7, 4, 0, 3, 8}; {0, 0, 11, 5, 6, 1, 1, 5, 3, 11, 5, 11}; {0, 0, 11, 3, 0, 4, 0, 8, 8, 1, 4, 8}; {0, 0, 0, 7, 8, 8, 0, 7, 0, 0, 7, 1}; {0, 0, 7, 7, 4, 6, 7, 6, 11, 7, 2, 7}; {0, 0, 1, 0, 5, 10, 4, 8, 7, 2, 1, 8}; {0, 0, 11, 8, 6, 1, 9, 2, 1, 5, 10, 2}; {0, 0, 5, 5, 1, 3, 8, 0, 7, 2, 7, 5}; {0, 0, 0, 10, 6, 8, 2, 1, 6, 6, 1, 7}; {0, 0, 2, 6, 4, 5, 1, 3, 9, 3, 1, 8}; {0, 0, 10, 8, 6, 1, 6, 9, 4, 9, 8, 0}; {0, 0, 2, 5, 9, 7, 6, 3, 6, 1, 8, 5}; {0, 0, 0, 11, 8, 0, 5, 0, 2, 7, 6, 0}; and {0, 0, 4, 3, 11, 9, 8, 10, 7, 2, 7,0}.

The sequence set 14 includes some or all of the following sequences: sequences in a union set of the first sequence set and a sequence set IDC.

Sequences in the sequence set IDC are 120 sequences in the InterDigital proposal R1-1716478:

{0, 0, 8, 7, 6, 0, 6, 4, 9, 5, 7, 10}; {0, 5, 6, 0, 7, 0, 11, 1, 4, 2, 0, 0}; {0, 7, 2, 0, 9, 10, 7, 10, 1, 2, 5, 10}; {0, 2, 0, 1, 0, 4, 7, 9, 3, 2, 11, 6}; {0, 10, 8, 5, 6, 0, 4, 6, 5, 9, 6, 11}; {0, 4, 4, 4, 10, 9, 9, 5, 9, 8, 4, 8}; {0, 9, 8, 1, 11, 11, 1, 6, 10, 7, 1, 5}; {0, 1, 3, 2, 11, 11, 5, 6, 0, 6, 0, 9}; {0, 7, 3, 1, 7, 8, 10, 3, 0, 2, 11, 1}; {0, 11, 1, 2, 3, 10, 8, 3, 8, 2, 4, 0}; {0, 10, 1, 10, 3, 10, 8, 7, 1, 3, 8, 11}; {0, 3, 10, 7, 5, 1, 5, 10, 1, 1, 3, 1}; {0, 3, 9, 11, 9, 7, 5, 10, 8, 0, 10, 1}; {0, 1, 3, 5, 2, 1, 2, 9, 2, 9, 9, 4}; {0, 7, 2, 2, 7, 2, 5, 5, 8, 2, 2, 1}; {0, 9, 0, 7, 9, 8, 0, 3, 4, 0, 6, 5}; {0, 7, 2, 6, 4, 1, 9, 10, 5, 7, 8, 9}; {0, 5, 11, 10, 1, 8, 7, 6, 0, 11, 10, 2}; {0, 11, 1,3,2, 1, 8, 10, 3, 8, 5, 0}; {0, 5, 11, 3, 2, 8, 3, 4, 6, 5, 1, 0}; {0, 6, 8, 0, 8, 7, 0, 10, 0, 7, 5, 7}; {0, 3, 1, 6, 4, 8, 5, 3, 2, 8, 0, 3}; {0, 1, 0, 9, 6, 1, 3, 9, 3, 9, 9, 0}; {0, 3, 0, 2, 7, 11, 11, 2, 10, 6, 3, 3}; {0, 5, 8, 8, 9, 7, 9, 4, 1, 10, 6, 10}; {0, 6, 7, 6, 0, 1, 10, 1, 1, 9, 1, 11}; {0, 10, 6, 6, 2, 4, 5, 11, 4, 1, 4, 5}; {0, 6, 4, 2, 9, 10, 9, 11, 7, 9, 10, 3}; {0, 9, 2, 2, 1, 9, 10, 0, 4, 5, 0, 5}; {0, 3, 11, 8, 3, 4, 9, 11, 0, 11, 1, 8}; {0, 5, 10, 3, 7, 4, 2, 3, 11, 9, 2, 1}; {0, 11, 8, 0, 9, 7, 11, 1, 0, 5, 8, 3}; {0, 4, 9, 2, 1, 5, 4, 8, 6, 4, 2, 1}; {0, 1, 10, 9, 11, 11, 4, 2, 9, 4, 7, 1}; {0, 1, 0, 11, 1, 6, 6, 0, 0, 7, 2, 8}; {0, 6, 1, 9, 3, 4, 10, 11, 6, 6, 5, 7}; {0, 3, 11, 2, 7, 9, 9, 11, 8, 4, 0, 10}; {0, 8, 4, 10, 7, 11, 1, 0, 5, 7, 3, 4}; {0, 1, 5, 6, 5, 5, 2, 5, 11, 5, 2, 9}; {0, 9, 6, 7, 2, 10, 3, 5, 8, 5, 6, 8}; {0, 11, 0, 11, 9, 1, 5, 5, 10, 0, 7, 2}; {0, 0, 0, 7, 8, 9, 1, 7, 0, 0, 8, 2}; {0, 0, 9, 10, 0, 5, 4, 11, 7, 11, 4, 11}; {0, 1, 5, 2, 7, 6, 0, 6, 8, 6, 3, 4}; {0, 7, 4, 9, 2, 3, 10, 8, 9, 11, 10, 10}; {0, 8, 10, 5, 10, 6, 4, 11, 1, 3, 5, 5}; {0, 0, 10, 4, 4, 2, 4, 9, 1, 0, 5, 11}; {0, 7, 11, 2, 11, 10, 10, 4, 3, 6, 5, 11}; {0, 10, 11, 1, 9, 3, 8, 7, 1, 3, 9, 8}; {0, 8, 3, 5, 10, 10, 1, 5, 2, 2, 4, 1}; {0, 4, 0, 10, 1, 10, 8, 1, 2, 0, 5, 7}; {0, 7, 4, 2, 11, 1, 6, 9, 9, 0, 9, 0}; {0, 1, 9, 11, 3, 2, 4, 8, 4, 11, 7, 2}; {0, 10, 10, 7, 3, 8, 6, 9, 11, 5, 10, 0}; {0, 6, 3, 9, 9, 11, 11, 9, 9, 3, 6, 0}; {0, 10, 8, 7, 0, 11, 7, 10, 0, 5, 1, 5}; {0, 7, 2, 6, 6, 1, 9, 11, 2, 1, 10, 11}; {0, 10, 4, 2, 8, 9, 8, 8, 8, 2, 7, 11}; {0, 0, 8, 7, 8, 11, 4, 10, 2, 0, 6, 2}; {0, 10, 6, 6, 11, 2, 7, 2, 7, 5, 7, 7}; {0, 5, 3, 8, 5, 8, 0, 5, 7, 5, 3, 2}; {0, 10, 9, 8, 1, 11, 4, 1, 6, 9, 1, 6}; {0, 0, 0, 11, 3, 8, 2, 7, 5, 0, 11, 5}; {0, 1, 1, 4, 2, 8, 3, 0, 1, 8, 10, 4}; {0, 9, 7, 2, 9, 1, 10, 11, 11, 2, 6, 8}; {0, 10, 7, 10, 6, 3, 9, 1, 4, 2, 5, 7}; {0, 6, 11, 6, 1, 0, 5, 6, 9, 9, 7, 7}; {0, 3, 1, 3, 4, 6, 0, 3, 0, 9, 7, 2}; {0, 4, 2, 6, 6, 0, 4, 7, 3, 2, 1, 10}; {0, 11, 6, 2, 1, 11, 1, 8, 1, 6, 6, 9}; {0, 1, 0, 11, 5, 5, 11, 0, 5, 0, 7, 0}; {0, 4, 7, 9, 1, 9, 1, 10, 2, 0, 10, 7}; {0, 2, 6, 8, 9, 4, 11, 2, 10, 3, 1, 11}; {0, 0, 11, 6, 7, 7, 10, 4, 9, 9, 3, 10}; {0, 8, 4, 0, 4, 11, 1, 9, 10, 10, 0, 3}; {0, 4, 10, 4, 8, 8, 1, 0, 5, 3, 1, 1}; {0, 0, 8, 1, 2, 10, 4, 8, 6, 0, 3, 3}; {0, 3, 6, 3, 6, 10, 7, 3, 7, 5, 2, 3}; {0, 5, 7, 11, 7, 2, 3, 2, 7, 4, 5, 4}; {0, 0, 4, 7, 11, 7, 6, 3, 9, 6, 9, 6}; {0, 3, 6, 9, 3, 2, 11, 6, 9, 7, 9, 7}; {0, 8, 4, 5, 0, 7, 0, 1, 4, 0, 2, 3}; {0, 10, 3, 0, 4, 5, 10, 3, 5, 2, 11, 0}; {0, 0, 4, 3, 9, 5, 3, 4, 0, 3, 9, 1}; {0, 6, 1, 3, 3, 8, 3, 4, 6, 4, 0, 0}; {0, 3, 11, 2, 6, 7, 6, 4, 3, 9, 6, 2}; {0, 1, 2, 10, 9, 3, 1, 11, 3, 8, 3, 8}; {0, 3, 2, 2, 9, 7, 6, 1, 5, 5, 10, 4}; {0, 4, 5, 7, 2, 9, 6, 6, 1, 5, 2, 2}; {0, 6, 0, 1, 8, 3, 1, 1, 1, 7, 8, 9}; {0, 10, 8, 8, 7, 0, 10, 3, 0, 4, 8, 1}; {0, 4, 8, 10, 4, 3, 0, 8, 10, 8, 11, 9}; {0, 10, 10, 8, 6, 9, 0, 11, 3, 4, 10, 4}; {0, 10, 6, 2, 6, 3, 5, 2, 6, 9, 1, 3}; {0, 9, 7, 5, 10, 7, 11, 8, 11, 1, 5, 9}; {0, 8, 4, 7, 1, 2, 7, 0, 11, 11, 1, 1}; {0, 11, 10, 4, 5, 5, 7, 1, 6, 5, 11, 5}; {0, 8, 7, 6, 1, 10, 2, 1, 3, 5, 11, 3}; {0, 8, 3, 6, 4, 0, 11, 1, 2, 10, 1, 4}; {0, 9, 1, 10, 4, 1, 1, 10, 1, 4, 8, 9}; {0, 7, 0, 5, 10, 10, 4, 3, 10, 10, 11, 10}; {0, 11, 3, 3, 6, 3, 2, 1, 9, 2, 6, 11}; {0, 11, 10, 8, 9, 0, 0, 5, 4, 10, 4, 9}; {0, 1, 11, 1, 3, 9, 9, 4, 2, 6, 0, 8}; {0, 8, 2, 10, 7, 10, 1, 8, 10, 3, 3, 3}; {0, 7, 2, 10, 2, 2, 3, 6, 1, 2, 10, 10}; {0, 1, 10, 10, 1, 3, 0, 7, 7, 0, 7, 2}; {0, 1, 8, 9, 6, 9, 10, 10, 3, 11, 7, 1}; {0, 8, 4, 5, 11, 6, 11, 0, 2, 10, 11, 0}; {0, 5, 5, 6, 10, 1, 8, 8, 6, 5, 9, 5}; {0, 8, 9, 5, 4, 10, 5, 2, 5, 5, 6, 9}; {0, 7, 5, 2, 11, 2, 7, 10, 11, 1, 11, 2}; {0, 3, 6, 11, 0, 8, 6, 5, 8, 5, 10, 7}; {0, 2, 4, 0, 4, 2, 7, 1, 11, 10, 6, 5}; {0, 10, 8, 5, 5, 10, 2, 4, 2, 6, 3, 7}; {0, 8, 7, 3, 0, 1, 3, 0, 3, 2, 7, 0}; {0, 9, 6, 5, 9, 6, 1, 3, 4, 8, 3, 6}; {0, 10, 10, 5, 1, 6, 4, 3, 7, 0, 3, 5}; {0, 11, 10, 7, 11, 10, 11, 5, 0, 4, 5, 10}; and {0, 3, 4, 9, 6, 9, 10, 5, 11, 9, 9, 6}.

Generally, a sequence with a relatively small PAPR also has a relatively small CM value. Through verification, the foregoing sequences all have very small CM values.

According to the sequence-based signal processing method disclosed in this embodiment of this application, an equivalent sequence of a sequence $\{s_n\}$ in the foregoing sequence sets may be expressed as $\{q_n\}$. An element $q_n$ in the equivalent sequence $\{q_n\}$ meets $q_n = s_n + u_n \ (mod \ M)$.

In specific implementation, optionally, the sequence $\{u_n\}$ including $u_n$ includes:

$$u_n = f + g \cdot n (\mathrm{mod} M) \ ,$$

where n=0, 1, ..., N-1, N is a sequence length, $f \in \{0, 1, 2, ..., M - 1\}$, $g \in \{0, 1, 2, ..., M - 1\}$, and M=12.

Herein, (modM) indicates that the foregoing equation holds true in a mod M case.

According to the sequence-based signal processing method provided in this embodiment of this application, a sequence meeting a requirement for sending a signal by using a PUCCH is determined. The sequence is the sequence $\{f_n\}$ including the N elements, and $f_n$ is an element in the sequence $\{f_n\}$. The determined sequence $\{f_n\}$ is a sequence that meets the preset condition. Then the N elements in the sequence $\{f_n\}$ are respectively mapped to the N subcarriers to generate and send the first signal. With the determined sequence, when the signal is sent by using the PUCCH, a low cross-correlation between sequences can be maintained, and a relatively small PAPR value and a relatively small CM value can be maintained. Therefore, a requirement in a communications application environment in which the signal is sent by using the PUCCH is met.

According to the sequence-based signal processing method disclosed in the embodiments of this application, the embodiments of this application further disclose a sequence-based signal processing apparatus and a communications system.

FIG. 6 is a schematic structural diagram of a sequence-based signal processing apparatus 600 according to an embodiment of this application. The signal processing apparatus 600 may be a communications device, or may be a chip in the communications device. The signal processing apparatus 600 includes a processing unit 601 and a transceiver unit 602.

The processing unit 601 is configured to determine a sequence $\{f_n\}$ including N elements, where $f_n$ is an element in the sequence $\{f_n\}$, and the sequence $\{f_n\}$ is a sequence that meets a preset condition.

For the preset condition related to the processing unit 601, refer to the preset condition disclosed in the sequence-based signal processing method disclosed in the foregoing embodiment of this application. The two preset conditions are consistent, and details are not described herein again.

The processing unit 601 is further configured to respectively map the N elements in the sequence $\{f_n\}$ to N subcarriers to generate a first signal.

The transceiver unit 602 is configured to send the first signal.

For a corresponding operation related to the signal processing apparatus 600 disclosed in this embodiment of this application, refer to a corresponding operation performed in the sequence-based signal processing method disclosed in the embodiments of this application. Details are not described herein again.

With reference to the sequence-based signal processing method disclosed in the embodiments of this application, the signal processing apparatus disclosed in this embodiment of this application may also be implemented directly by using hardware, a memory executed by a processor, or a combination thereof.

As shown in FIG. 7, a signal processing apparatus 700 includes a processor 701 and a transceiver 703. Optionally, the signal processing apparatus 700 further includes a memory 702.

The processor 701 is coupled to the memory 702 by using a bus, and the processor 701 is coupled to the transceiver 703 by using the bus.

The processor 701 may be specifically a central processing unit (central processing unit, CPU), a network processor (network processor, NP), an application-specific integrated circuit (application-specific integrated circuit, ASIC), or a programmable logic device (programmable logic device, PLD). The PLD may be a complex programmable logical device (complex programmable logical device, CPLD), a field-programmable gate array (field-programmable gate array, FPGA), or generic array logic (generic array logic, GAL).

The memory 702 may be specifically a content addressable memory (content-addressable memory, CAM) or a random access memory (random-access memory, RAM). The CAM may be a ternary content addressable memory (ternary cam, TCAM).

When the signal processing apparatus 700 is a communications device, the transceiver 703 may be a radio frequency circuit. When the signal processing apparatus 700 is a chip in a terminal device, the transceiver 703 may be an input/output interface, a pin, or a circuit in the chip.

The memory 702 may alternatively be integrated in the processor 701. If the memory 702 and the processor 701 are devices independent of each other, the memory 702 is connected to the processor 701, for example, the memory 702 may communicate with the processor 701 by using the bus. The transceiver 703 and the processor 701 may communicate with each other by using the bus, or the transceiver 703 may be directly connected to the processor 701.

The memory 702 is configured to store an operation program, code, or an instruction for sequence-based signal processing. Optionally, the memory 702 includes an operating system and an application program and is configured to store an operation program, code, or an instruction for sequence-based signal processing.

When the processor 701 or a hardware device needs to perform an operation related to sequence-based signal processing, the processor 701 or the hardware device may invoke and execute the operation program, the code, or the instruction stored in the memory 702, to complete a sequence-based signal processing process performed by the terminal device in FIG. 1 to FIG. 6. For a specific process, refer to a corresponding part of the foregoing embodiments of this application. Details are not described herein again.

It may be understood that, FIG. 7 shows merely a simplified design of the signal processing apparatus 700. In actual application, the signal processing apparatus 700 may include any quantity of transceivers, processors, memories, and the like, and all signal processing apparatuses 700 that can implement the embodiments of this application fall within the protection scope of the embodiments of this application.

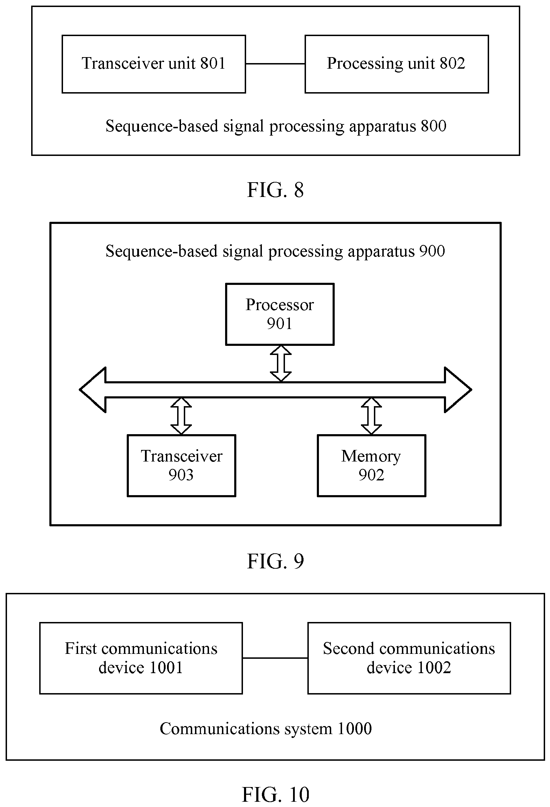

FIG. 8 is a schematic structural diagram of a sequence-based signal processing apparatus 800 according to an embodiment of this application. The signal processing apparatus 800 may be a communications device, or may be a chip in the communications device. The signal processing apparatus 800 includes a transceiver unit 801 and a processing unit 802.

The transceiver unit 801 is configured to receive a first signal carried on N subcarriers.

The processing unit 802 is configured to obtain N elements in a sequence $\{f_n\}$, where the first signal is generated by respectively mapping the N elements in the sequence $\{f_n\}$ including the N elements to the N subcarriers, $f_n$ is an element in the sequence $\{f_n\}$, and the sequence $\{f_n\}$ is a sequence that meets a preset condition.

For the preset condition related to the transceiver unit 801, refer to the preset condition disclosed in the sequence-based signal processing method disclosed in the foregoing embodiments of this application. The two preset conditions are consistent, and details are not described herein again.

The processing unit 802 is further configured to process the first signal based on the N elements in the sequence $\{f_n\}$.

For a corresponding operation related to the signal processing apparatus 800 disclosed in this embodiment of this application, refer to a corresponding operation performed in the sequence-based signal processing method disclosed in the embodiments of this application. Details are not described herein again.

With reference to the sequence-based signal processing method disclosed in the embodiments of this application, the signal processing apparatus disclosed in this embodiment of this application may also be implemented directly by using hardware, a memory executed by a processor, or a combination thereof.

As shown in FIG. 9, the signal processing apparatus 900 includes a processor 901 and a transceiver 903. Optionally, the signal processing apparatus 900 further includes a memory 902.

The processor 901 is coupled to the memory 902 by using a bus, and the processor 901 is coupled to the transceiver 903 by using the bus.

The processor 901 may be specifically a CPU, an NP, an ASIC, or a PLD. The PLD may be a CPLD, an FPGA, or GAL.

The memory 902 may be specifically a CAM or a RAM. The CAM may be a TCAM.

When the signal processing apparatus 900 is a communications device, the transceiver 903 may be a radio frequency circuit. When the signal processing apparatus 900 is a chip in a terminal device, the transceiver 903 may be an input/output interface, a pin, or a circuit in the chip.

The memory 902 may alternatively be integrated in the processor 901. If the memory 902 and the processor 901 are devices independent of each other, the memory 902 is connected to the processor 901, for example, the memory 902 may communicate with the processor 901 by using the bus. The transceiver 903 and the processor 901 may communicate with each other by using the bus, or the transceiver 903 may be directly connected to the processor 901.

The memory 902 is configured to store an operation program, code, or an instruction for sequence-based signal processing. Optionally, the memory 902 includes an operating system and an application program and is configured to store an operation program, code, or an instruction for sequence-based signal processing.

When the processor 901 or a hardware device needs to perform an operation related to sequence-based signal processing, the processor 901 or the hardware device may invoke and execute the operation program, the code, or the instruction stored in the memory 902, to complete a sequence-based signal processing process performed by the network device in FIG. 1 to FIG. 5. For a specific process, refer to a corresponding part of the foregoing embodiments of this application. Details are not described herein again.

It may be understood that, FIG. 9 shows merely a simplified design of the signal processing apparatus 900. In actual application, the signal processing apparatus 900 may include any quantity of interfaces, processors, memories, and the like, and all signal processing apparatuses 900 that can implement the embodiments of this application fall within the protection scope of the embodiments of this application.

FIG. 10 shows a communications system 1000 according to an embodiment of this application. The communications system 1000 includes a first communications device 1001 and a second communications device 1002. The first communications device 1001 is a device on a transmitter side, and the second communications device 1002 is a device on a terminal side.

The first communications device 1001 is configured to: determine a sequence $\{f_n\}$ including N elements, respectively map the N elements in the sequence $\{f_n\}$ to N subcarriers to generate a first signal, and send the first signal to the second communications device 1002.

The second communications device 1002 is configured to: receive the first signal on the N subcarriers that is sent by the first communications device, obtain the N elements in the sequence $\{f_n\}$, and process the first signal based on the N elements in the sequence $\{f_n\}$.

In the foregoing communications system disclosed in this embodiment of this application, a quantity of first communications devices 1001 and a quantity of second communications devices 1002 are not limited. The first communications device 1001 may be specifically the communications devices disclosed in FIG. 6 and FIG. 7. Optionally, the first communications device 1001 may be configured to perform a corresponding operation performed by the terminal devices in FIG. 1 to FIG. 5 in the embodiments of this application. The second communications device 1002 may be specifically the communications devices disclosed in FIG. 8 and FIG. 9. Optionally, the second communications device 1002 may be configured to perform a corresponding operation performed by the network devices in FIG. 1 to FIG. 5 in the embodiments of this application. For a specific process and an execution principle, refer to the foregoing descriptions. Details are not described herein again.

Persons skilled in the art should be aware that in the foregoing one or more examples, functions described in this application may be implemented by hardware, software, firmware, or any combination thereof. When this application is implemented by software, the foregoing functions may be stored in a computer readable medium or transmitted as one or more instructions or code in the computer readable medium. The computer readable medium includes a computer storage medium and a communications medium. The communications medium includes any medium that enables a computer program to be transmitted from one place to another. The storage medium may be any available medium accessible to a general-purpose or dedicated computer.

The embodiments in this specification are all described in a progressive manner, for same or similar parts in the embodiments, refer to these embodiments, and each embodiment focuses on a difference from other embodiments. Especially, apparatus and system embodiments are basically similar to a method embodiment, and therefore are described briefly. For related parts, refer to descriptions in the method embodiment. application.

## Claims

1. A sequence-based signal processing method, wherein the signal processing method comprises:

    determining (S101) a sequence $\{f_n\}$ comprising N elements, wherein $f_n$ is an element in the sequence $\{f_n\}$, the sequence $\{f_n\}$ is a sequence that meets a preset condition, the preset condition is $f_n = A \cdot x_n \cdot e^{2\pi j \cdot a \cdot n}$, a value of n ranges from 0 to N-1, A is a non-zero complex number, $a$ is a real number, $j = \sqrt{-1}$ , for an element $x_n$, $x_n = u \cdot e^{2\pi j \cdot s_n / M}$, M=12, u is a non-zero complex number, and a set of sequences $\{s_n\}$ consisting of an element $s_n$ comprises at least one of sequences in a first sequence set, wherein the sequences in the first sequence set comprise some or all of the following sequences:

{-2, 4, -2, 4, 0, 2, 2, 0, 5, 5, 0, 0}; {-1, 6, 1, -4, -2, 4, -5, -5, 6, -5, 0, 0}; {3, -3, 3, -3, 0, -2, -2, 0, -5, -5, 0, 0}; {2, -4, 2, -4, -1, -2, -2, -1, -5, 6, 0, 0}; {-4, 2, -4, 3, -1, 1, 2, 1, 4, 5, 0, 0}; {0, 6, 0, -5, -2, -4, -3, -1, 6, 6, 0, 0}; {0, 6, 0, -5, -2, -3, -3, -1, 6, 6, 0, 0}; {-1, 5, -1, 6, -2, -3, -3, -1, 5, 5, 0, 0}; {-4, 2, -4, 4, -4, -5, -4, -2, 5, 5, 0, 0}; {-5, 1, -5, 3, -5, 6, -5, -3, 5, 5, 0, 0}; {4, -2, 4, 0, -4, -1, 0, -1, 3, 4, 0, 0}; {0, 4, -4, 2, -3, -2, -3, 4, 1, -2, 0, 0}; {-1, 3, -5, 1, -4, -3, -3, 4, 1, -2, 0, 0}; {0, 5, -2, 5, 2, 4, 3, 1, -3, -4, 0, 0}; {-3, 1, 5, -1, -5, -4, -5, 3, 0, -3, 0, 0}; {3, -3, 3, -1, 0, 6, -3, -3, -5, -4, 0, 0}; {1, 6, -1, 6, 6, 0, 2, 0, -3, -1, 0, 0}; {5, -2, 3, -2, 0, -1, 0, 0, -5, 6, 0, 0}; {-3, 3, -3, 5, -4, -4, -4, -2, 5, 5, 0, 0}; {-3, 0, 3, -3, 3, 1, 3, -5, 4, 1, 0, 0}; {-1, 4, -3, 5, 4, -2, 1, 0, -3, -2, 0, 0}; {3, -1, -5, -5, 1, -4, 0, 1, 4, -1, 0, 0}; {2, -2, 6, 6, 1, -5, 0, 1, 4, -1, 0, 0}; {0, -5, 2, 2, -5, 1, 4, 4, 6, 1, 0, 0}; {1, -3, 5, 6, 0, -5, -1, 1, 3, -1, 0, 0}; {-3, 4, -1, -1, 5, -1, 3, 4, 5, 0, 0, 0}; {-5, 1, -5, 6, -1, 4, -5, -5, -5, 1, 0, 0}; {-2, 5, 0, 0, 6, 0, 3, 4, 5, 0, 0, 0}; {-5, 1, -5, 6, -1, 5, -5, 6, -5, 1, 0, 0}; {3, -3, 3, 3, -4, 2, 5, 5, 6, 0, 0, 0}; {-3, 3, -3, -3, 4, -2, -5, -5, 6, 0, 0, 0}; {4, -3, 2, 2, -4, 1, -2, -3, -5, 0, 0, 0}; {5, -1, 5, 6, 1, -5, 5, 6, 5, -1, 0, 0}; {5, -1, 5, 6, 1, -4, 5, 5, 5, -1, 0, 0}; {3, -4, 1, 1, -5, 1, -3, -4, -5, 0, 0, 0}; {-1, 3, -5, 6, 0, 5, 1, -1, -3, 1, 0, 0}; {0, 5, -2, -2, 5, -1, -4, -4, 6, -1, 0, 0}; {-2, 2, 6, 6, -1, 5, 0, -1, -4, 1, 0, 0}; {-2, 2, 6, 6, 0, 5, 1, -1, -3, 1, 0, 0}; {-3, 1, 5, 5, -1, 4, 0, -2, -4, 1, 0, 0}; {-3, 1, 5, 5, -1, 4, 0, -1, -4, 1, 0, 0}; {-2, 3, -4, -3, 4, -2, -5, -5, 6, -1, 0, 0}; {3, 0, -3, 3, -3, -1, -3, 5, -4, -1, 0, 0}; {4, -2, 4, -4, 4, 5, 4, 2, -5, -5, 0, 0}; {-5, 2, -3, 2, 0, 1, 0, 0, 5, 6, 0, 0}; {-1, 5, -1, 3, 5, 1, 1, 6, 5, -1, 0, 0}; {0, -5, 2, -5, -2, -4, -3, -1, 3, 4, 0, 0}; {4, -2, 4, -3, 6, 6, 4, 3, -5, -5, 0, 0}; {2, -4, 2, -5, 4, 5, 3, 2, -5, -5, 0, 0}; {-3, 3, -3, 2, 0, -5, 4, 3, -1, 0, 0, 0}; {0, 6, 0, 5, 3, 4, 3, 1, 6, 6, 0, 0}; {6, 0, 6, -1, 2, 0, -1, 0, -4, -5, 0, 0}; {-4, 4, 1, -4, -4, 0, 4, 0, 3, -1, 0, 0}; {-1, 5, 0, 5, 3, 3, 2, 1, 6, -5, 0, 0}; {-3, 2, -4, 0, -2, -4, -5, 4, -4, -4, 0, 0}; {-1, 6, 2, -4, -2, -3, 4, -5, -1, 2, 0, 0}; {5, -2, 4, -3, 5, 6, 5, 3, -5, -5, 0, 0}; {-1, 5, 0, 6, -3, -4, -4, -2, 6, 6, 0, 0}; {-5, 1, -4, 3, -5, 6, -5, -3, 5, 5, 0, 0}; {5, -3, 2, -5, -3, 6, 3, -4, 6, 0, 0, 0}; {3, -5, 0, 5, -4, 5, 2, -5, 5, 0, 0, 0}; {0, 5, -1, 5, 5, -2, -2, 2, 2, 2, 0, 0}; {-5, 0, 6, 0, 2, 0, 0, 1, -4, -5, 0, 0}; {-4, 1, -5, 3, -5, 6, -4, -3, 5, 5, 0, 0}; {-3, 1, 6, 1, -5, -4, -4, 3, 1, -2, 0, 0}; {6, -3, 1, -5, 1, 0, 1, 6, 3, 0, 0, 0}; {-5, -1, 4, 0, 3, -3, -4, 2, 0, -2, 0, 0}; {5, 0, -4, -4, 2, -3, 1, 2, 4, -1, 0, 0}; {3, -2, 6, 6, 1, -4, 0, 1, 4, -1, 0, 0}; {-1, 5, 0, 0, 5, 0, 4, 4, 5, 0, 0, 0}; {5, -1, 6, 6, -1, -2, 4, 6, 2, 0, 0, 0}; {-1, 5, 0, 0, 6, 0, 3, 4, 5, 0, 0, 0}; {-1, 4, -2, -2, 4, -1, -4, -4, 6, -1, 0, 0}; {-5, -1, 4, 3, -3, 3, -1, -2, -4, 0, 0, 0}; {-3, 1, 6, 5, -1, 4, 0, -2, -3, 1, 0, 0}; {-2, 3, -3, -3, 4, -2, -5, -5, 6, -1, 0, 0}; {-5, -1, 4, 3, -2, 3, -1, -2, -4, 0, 0, 0}; {-4, 1, -5, -5, 3, -3, 6, 6, 6, -1, 0, 0}; {6, -2, 3, 2, -3, 2, -1, -3, -4, 0, 0, 0}; {3, 6, -2, -3, 3, -5, 3, 1, -2, 2, 0, 0}; {-5, -1, 4, 4, -3, 3, -1, -2, -4, 1, 0, 0}; {6, -2, 3, 3, -3, 3, -1, -2, -4, 0, 0, 0}; {5, -3, 2, 2, -4, 2, -2, -3, -5, 0, 0, 0}; {5, 1, -2, 4, -2, 0, -3, 6, -4, -1, 0, 0}; {3, -2, 6, -1, 4, 5, 1, -2, -2, 0, 0, 0}; {5, -1, -5, -1, 1, 3, -3, 3, 3, 1, 0, 0}; {4, 1, 0, -5, 1, 6, 2, 2, 5, -3, 0, 0}; {3, -1, -3, 3, -3, -1, 6, -4, -5, -1, 0, 0}; {1, -3, -5, 1, -5, -2, 6, -5, 6, -3, 0, 0}; {2, -5, 2, -5, 4, 5, 3, 2, -5, -5, 0, 0}; {-1, 3, -3, 1, 0, 4, 1, -5, 6, 2, 0, 0}; {-2, 2, -4, 0, -1, 3, 1, 6, 5, 3, 0, 0}; {5, -1, -5, 2, -5, -1, 3, 5, 4, 4, 0, 0}; {5, -1, -5, 2, -5, -1, 3, 6, 5, 4, 0, 0}; {0, 4, -2, 3, 6, 4, 0, 6, 4, 0, 0, 0}; {-3, 3, -1, 6, -5, -2, -4, -2, 3, 3, 0, 0}; {-4, -1, 4, -3, -1, -5, 3, -4, 5, 0, 0, 0}; {-5, -2, 3, -4, -2, -5, 4, -4, 6, 0, 0, 0}; {0, 4, -2, 4, -2, -3, -1, -1, 4, 3, 0, 0}; {6, -3, 2, -5, 4, -5, -5, -3, 6, 3, 0, 0}; {6, -2, 4, -2, -4, 1, 0, 4, 4, 2, 0, 0}; {6, -2, 4, -2, -3, 2, 1, 5, 4, 2, 0, 0}; {4, -3, 4, 0, 0, 6, -5, -1, 1, -1, 0, 0}; {-1, 2, -5, 1, 0, 4, 3, 6, 5, 3, 0, 0}; {3, 5, -3, 2, 3, -1, 6, -1, -5, 1, 0, 0}; {-2, 1, 6, 0, -5, -4, -2, -2, 4, 2, 0, 0}; {-3, 2, -3, 6, -3, 3, 4, -1, -2, -3, 0, 0}; {1, 3, -5, 1, 2, -3, 4, -3, 5, 0, 0, 0}; {0, 2, 6, 0, 1, -3, 4, -3, 5, 0, 0, 0}; {-3, -1, 3, -2, 6, -2, -5, -3, -5, 5, 0, 0}; {0, 3, -4, -5, 1, 6, 1, 0, -3, 1, 0, 0}; {-4, 3, 0, 4, -4, -3, 4, 0, 0, -1, 0, 0}; {-4, 4, 2, -5, 0, 3, -2, -5, -2, 0, 0, 0}; {-5, 3, 1, 6, -1, 2, -2, -5, -2, 0, 0, 0}; {5, 1, 0, 5, -2, 2, -3, 6, -2, 0, 0, 0}; {-4, 4, 3, -3, 3, -5, 4, 5, 5, -4, 0, 0}; {4, -1, -3, 3, -3, -1, -5, -4, 6, -2, 0, 0}; {-1, 5, 2, -4, -4, 1, 5, -1, 1, 0, 0, 0}; {-3, 3, 0, 6, -5, -1, -5, -2, 3, 2, 0, 0}; {2, 6, 1, 6, 6, -1, -2, 4, 3, 1, 0, 0}; {-1, 2, -4, 0, 0, 4, 2, -5, 5, 2, 0, 0}; {-2, 4, 1, -4, 3, -5, -1, 4, 4, 3, 0, 0}; {-5, -1, 6, -1, -3, 1, 2, -5, 4, 2, 0, 0}; {4, -4, 3, -4, -5, 0, -1, 4, 4, 1, 0, 0}; {4, -4, 3, -4, -5, 0, -1, 4, 4, 2, 0, 0}; {2, 5, -1, 3, 1, 5, 3, -4, 6, 3, 0, 0}; {1, 4, -2, 3, 1, 5, 3, -5, 6, 3, 0, 0}; {3, -4, 4, -1, -1, 5, 6, -1, 1, -1, 0, 0}; {-2, 1, -5, 0, -1, 3, 2, 6, 5, 3, 0, 0}; {-2, 4, 1, -3, 3, -5, 0, 3, 3, 3, 0, 0}; {6,-2, 5, -1, 5, 5, -4, -4, 5, 5, 0, 0}; {5, -3, 4, -2, 5, 5, -5, -4, 5, 5, 0, 0}; {5,-2, 6, 1, 0, 6, -5, 0, 2, 0, 0, 0}; {1, 4, -2, 3, 0, 4, 4, -4, 6, 3, 0, 0}; {0, 2, -5, 0, 1, -3, 4, -3, 5, 0, 0, 0}; {-2, 0, 5, -2, 0, -4, 4, -3, 6, 0, 0, 0}; {5, -5, 0, 6, 3, -5, 5, -4, 6, 5, 0, 0}; {-5, -2, 4, -1, 5, -4, -5, 3, 0, -2, 0, 0}; {-3, -1, 4, 2, 4, -1, 6, 1, 0, 4, 0, 0}; {5,-5, 1, -1, 2, -3, 4, -1, -1, 3, 0, 0}; {-2, -5, -4, 2, -3, 2, 0, 2, 3, -5, 0, 0}; {0, -5, 6, -1, 3, 6, 1, -3, -1, -1, 0, 0}; {5, 0, -1, 5, 5, -3, 3, -2, 1, 0, 0, 0}; {1, -4, -5, 1, 3, -5, 1, -3, 0, -1, 0, 0}; {-5, 2, 1, -5, -2, 3, -3, 6, -2, 0, 0, 0}; {0, 6, 4, -2, -4, 1, 5, -1, 1, 1, 0, 0}; {-1, 4, 1, -5, -3, 3, 4, -1, 0, -2, 0, 0}; {-2, 4, 2, -3, 1, 5, 4, 5, -1, 2, 0, 0}; {-3, -1, 5, -2, -1, -5, 3, -4, 5, -1, 0, 0}; {-5, -3, -3, -4, -2, 6, 1, -5, 4, -1, 0, 0}; {6, -5, 0, 4, 5, 0, -5, -1, -5, 1, 0, 0}; {0, 4, 0, -5, -1, 4, 5, 1, -1, -3, 0, 0}; {2, -3, -3, 3, 5, 1, -4, 1, -2, -1, 0, 0}; {-3, 3, 2, -4, -3, 5, -1, 3, 0, 0, 0, 0}; {-4, 2, 1, -5, -4, 4, -2, 2, 0, 0, 0, 0}; {-3, -1, 6, -4, 6, -2, 5, -1, -4, 5, 0, 0}; {1, -4, -4, 3, 2, 6, 0, -3, 0, -1, 0, 0}; {-1, 5, 4, -2, -4, 0, 5, 0, 2, 1, 0, 0}; {0,-5, -5, 2, 1, 6, 0, -4, -1, -1, 0, 0}; {-1, 6, 6, 1, 1, 6, 0, -4, -1, -1, 0, 0}; {-4, 2, 1, -5, 6, -1, 3, -2, 1, 0, 0, 0}; {-3, 4, 4, -1, -1, 5, -2, 6, -2, -2, 0, 0}; {-4, 3, 3, -2, -2, 4, -2, 6, -2, -1, 0, 0}; {-4, 3, 3, -2, -1, 4, -2, -5, -1, -1, 0, 0}; {-5, 1, 0, 6, 6, -2, 4, -1, 1, 0, 0, 0}; {-4, 3, 3, -2, -1, 4, -1, -5, -1, -1, 0, 0}; {3, 5, 0, 3, -4, 4, 2, -5, 5, -1, 0, 0}; {-3, 3, 2, -3, 6, -3, 3, 0, 1, -1, 0, 0}; {1, 4, 0, -5, -1, 4, 5, 1, -1, -4, 0, 0}; {-3, -2, 4, -2, -1, -5, 2, -5, 4, -1, 0, 0}; {-4, 2, 2, -5, -3, 4, -2, 3, 0, 0, 0, 0}; {5, -3, -5, -1, -3, 4, -4, -3, 5, 4, 0, 0}; {-5, 3, 5, 1, 3, -4, 4, 3, -5, -4, 0, 0}; {6, 0, 0, 6, -5, 3, -2, 2, -1, 0, 0, 0}; {6, 0, 0, 6, -5, 3, -2, 3, -1, 0, 0, 0}; {-4, 2, 2, -4, 6, -2, 4, -1, 1, 1, 0, 0}; {-5, 1, 1, -5, 5, -3, 3, -2, 1, 1, 0, 0}; {6, 0, 0, 6, 5, -3, 2, -2, 1, 0, 0, 0}; {6, 0, 0, 6, 5, -3, 3, -2, 1, 0, 0, 0}; {4, -2, -2, 5, 3, -4, 2, -3, 0, 0, 0, 0}; {6, 3, -5, 2, -4, 6, 5, 3, 6, -5, 0, 0}; {-3, -5, 0, -3, 4, -4, -2, 5, -5, 1, 0, 0}; {-4, 3, 5, -1, -5, 2, 6, -5, 0, 0, 0, 0}; {4, -2, -1, 5, 4, -4, 2, -2, 0, 0, 0, 0}; {-1, 4, 4, -3, -2, 6, 0, 3, 0, 1, 0, 0}; {0, -5, -3, 4, -4, 5, 1, -5, -5, -2, 0, 0}; {5, -2, -2, 3, 0, 4, -4, 3, 1, 2, 0, 0}; {0, 6, -5, 2, 0, 5, 0, -4, -1, 0, 0, 0}; {-2, 3, 3, -3, -5, -1, 4, -1, 2, 1, 0, 0}; {3, -4, -4, 2, -2, 1, -5, 3, 1, 1, 0, 0}; {2, -4, -3, 4, 1, 6, 1, -3, -1, 0, 0, 0}; {0,4, 3, -4, 3, 6, -1, 6, 4, 2, 0, 0}; {-5, 5, -1, 1, -2, 3, -4, 1, 1, -3, 0, 0}; {-1, -3, 3, -4, 6, 3, -2, 0, -5, -1, 0, 0}; {-4, 4, -4, 1, -5, -4, 6, 4, -5, -5, 0, 0}; {6, 5, 0, -4, -5, 0, 5, 1, 5, -1, 0, 0}; {5, 3, -3, 4, 2, 6, -1, 5, -4, 1, 0, 0}; {3, 1, -5, 2, 1, 5, -3, 4, -5, 1, 0, 0}; {4, -1, 2, -5, 0, -1, -3, -5, -4, -3, 0, 0}; {3, -2, 1, -5, 1, -2, -4, 6, -5, -3, 0, 0}; {-4, 1, 2, -5, -4, 4, -2, 5, 0, 1, 0, 0}; {2, -4, -2, 4, 0, 5,

-3, -3, 1, -1, 0, 0}; {5, -2, -1, 5, 2, -3, 3, 6, 2, 0, 0, 0}; {2, 5, 4, -2, 3, -2, 0, -2, -3, 5, 0, 0}; {-5, -1, 0, -5, 2, -2, 3, 6, 2, 0, 0, 0}; {3, 1, -4, -2, -4, 1, 6, -1, 0, -4, 0, 0}; {2, -1, 5, -2, -5, 5, 0, 1, -4, -1, 0, 0}; {2, 0, -5, 2, 0, 4, -4, 3, 6, 0, 0, 0}; {0, -2, 5, 0, -1, 3, -4, 3, -5, 0, 0, 0}; {4, -1, 3, -4, 2, -1, -4, 6, -5, -4, 0, 0}; {2, -4, -1, 3, -3, 5, 0, -3, -3, -3, 0, 0}; {4,-2, 1, 6, 0, -1, -3, -5, -4, -3, 0, 0}; {-1, 5, -4, 1, -5, 3, -1, -4, -4, -3, 0, 0}; {-2, 4, -5, 0, 6, 2, -1, -4, -4, -3, 0, 0}; {3, -3, 0, 6, 5, 1, 5, 2, -3, -2, 0, 0}; {5, 2, -4, 5, 1, 5, -4, 4, 6, 0, 0, 0}; {3, 3, 0, 1, -5, 0, 6, 2, -4, -4, 0, 0}; {4, -4, -3, 3, -3, 5, -4, -5, -5, 4, 0, 0}; {-1, 3, 5, -1, 5, 2, 6, 5, 6, 3, 0, 0}; {-3, 1, 3, -3, 3, 1, 6, 4, 5, 1, 0, 0}; {-4, -1, 0, 5, -1, 6, -2, -2, -5, 3, 0, 0}; {-5, -1, 1, -4, 2, -1, 3, 6, 4, 1, 0, 0}; {5, -3, -1, 6, 1, -2, 2, 5, 2, 0, 0, 0}; {4, -4, -2, 5, 0, -3, 2, 5, 2, 0, 0, 0}; {4, -3, 0, -4, 4, 3, -4, 0, 0, 1, 0, 0}; {4, -2, 2, -1, -1, 6, -1, -3, -5, -4, 0, 0}; {0, -3, 4, 5, -1, 6, -1, 0, 3, -1, 0, 0}; {0,-2, 6, 0, -1, 3, -4, 3, -5, 0, 0, 0}; {-1, -3, 5, -1, -2, 3, -4, 3, -5, 0, 0, 0}; {-5, 2, -5, -1, 6, -5, 6, 4, -5, -5, 0, 0}; {-5, 3, -3, 2, -2, 0, 1, 0, 4, 5, 0, 0}; {-3, -5, 3, -2, -3, 1, 6, 1, 5, -1, 0, 0}; {-3, 5, -1, 5, -1, 1, 2, 1, 4, 5, 0, 0}; {-4, 4, -2, 4, -2, 1, 2, 1, 4, 5, 0, 0}; {-5, 3, -3, 3, -2, 0, 1, 0, 4, 5, 0, 0}; {4, -1, 4, -3, 4, 5, 5, 3, 6, 6, 0, 0}; {1, -4, 1, 6, 1, 2, 6, 5, 1, -1, 0, 0}; {2, -3, 2, -5, 3, 4, 4, 2, 6, 6, 0, 0}; {5, 2, -3, 4, 2, 5, -4, 4, 6, 0, 0, 0}; {4, 1, -4, 3, 1, 5, -3, 4, -5, 0, 0, 0}; {-5, 3, -3, 5, 3, -5, -3, 4, 6, 0, 0, 0}; {-2, 6, 0, -4, 4, -5, -2, 5, -5, 0, 0, 0}; {3, -2, 3, -1, 0, 6, -2, -3, -5, -4, 0, 0}; {0, -5, 0, -4, 1, 3, 2, 1, 5, 5, 0, 0}; {-1, 6, 0, -4, 3, 2, 2, -4, -1, 2, 0, 0}; {6, 1, -5, 3, -5, 6, -5, -2, 3, 4, 0, 0}; {-1, 5, -2, 6, -1, 2, 2, 0, 4, 4, 0, 0}; {-3, 2, 6, 1, -4, -5, -1, 2, 2, 0, 0, 0}; {-5, -1, 2, -4, 2, 0, 3, 6, 4, 1, 0, 0}; {5, -1, 4, 1, -2, -3, 3, -4, -2, -1, 0, 0}; {0,-4, 3, 3, -4, -4, 0, 4, 0, 1, 0, 0}; {-5, 3, -2, -2, 4, -2, 2, 3, 5, 0, 0, 0}; {6, 2, -3, -3, 3, -3, 1, 2, 4, 0, 0, 0}; {5, 1, -4, -4, 3, -3, 1, 2, 4, -1, 0, 0}; {6, 2, -3, -2, 3, -2, 1, 3, 4, 0, 0, 0}; {4, -1, 5, 5, -3, 3, 6, 6, 6, 1, 0, 0}; {5, 1, -4, -3, 2, -3, 1, 2, 4, 0, 0, 0}; {5, 1, -4, -3, 3, -3, 1, 2, 4, 0, 0, 0}; {2, -3, 3, 3, -4, 2, 5, 5, 6, 1, 0, 0}; {1, -4, 2, 2, -4, 1, 4, 4, 6, 1, 0, 0}; {1, -5, 0, 0, 6, 0, -3, -4, -5, 0, 0, 0}; {-5, 1, 6, 6, 1, 2, -4, 6, -2, 0, 0, 0}; {1, -5, 0, 0, -5, 0, -4, -4, -5, 0, 0, 0}; {-3, 2, 6, 6, -1, 4, 0, -1, -4, 1, 0, 0}; {-5, 0, 4, 4, -2, 3, -1, -2, -4, 0, 0, 0}; {6, -1, 3, 3, -2, 3, -1, -3, -4, 1, 0, 0}; {-1, -3, 6, 0, 3, -1, 2, 3, 3, -4, 0, 0}; {6, 3, -1, 5, -1, 0, -1, 6, -3, 0, 0, 0}; {6, 2, -3, 2, -4, -1, 3, 4, -1, -1, 0, 0}; {3, -2, 4, -4, 3, 4, 5, 3, 6, 6, 0, 0}; {4, -1, 5, -3, 5, 6, 4, 3, -5, -5, 0, 0}; {1, -4, 2, 6, 2, 3, 4, 2, 6, 6, 0, 0}; {1, -4, 2, -5, 3, 4, 3, 2, 6, 6, 0, 0}; {-2, 5, -1, 4, 1, 2, 2, 1, 5, 6, 0, 0}; {5, -1, 4, -3, 5, 6, 5, 3, -5, -5, 0, 0}; {-5, 3, -2, 5, 3, 6, -3, 4, 6, 0, 0, 0}; {-3, 4, -2, 4, -1, 1, 2, 1, 4, 5, 0, 0}; {-5, 2, -4, 2, -2, 0, 1, 0, 4, 5, 0, 0}; {-3, 5, 0, -5, 4, -5, -2, 5, -5, 0, 0, 0}; {6, 0, 5, -1, -5, -5, 5, 4, -4, -4, 0, 0}; {2, -4, 1, -5, 3, 4, 4, 2, 6, 6, 0, 0}; {2, -4, 1, -5, 4, 4, 4, 2, 6, -5, 0, 0}; {-1, 6, 0, -5, -2, -4, -3, -1, 5, 5, 0, 0}; {-1, 6, 0, -5, -2, -3, -3, -1, 5, 5, 0, 0}; {-4, 3, -3, 4, -4, -5, -4, -2, 5, 5, 0, 0}; {-5, 2, -4, 3, -5, 6, -5, -3, 5, 5, 0, 0}; and {-5, 2, -4, 3, -4, -5, -5, -1, 2, 4, 0, 0}; and {-2, 5, -1, 6, -1, 2, 3, 1, 4, 5, 0, 0};

{-3, 2, -5, 0, -1, -3, -5, 5, -3, -4, 0, 0}; {6, 0, 6, 0, 4, -5, -4, 2, 0, -2, 0, 0}; {0, 0, 0, 1, 10, 8, 5, 0, 4, 9, 10, 2}; {1, -5, 1, -3, -5, -1, -1, 6, -5, 1, 0, 0}; {-4, 1, 6, 1, -2, 6, 0, 2, 4, 3, 0, 0}; {-3, 1, 5, 0, -5, -3, -4, 3, 0, -2, 0, 0}; {4, 5, 6, -2, 3, -1, 4, -1, -2, 4, 0, 0}; {-4, -1, 2, -4, 6, -2, -4, -5, -4, 3, 0, 0}; {-2, 3, -4, 4, 5, 6, 1, 1, -3, -5, 0, 0}; {0, 0, 0, 4, 8, 11, 9, 6, 10, 5, 0, 11}; {2, -4, 2, 1, 6, 4, -5, -1, 3, 1, 0, 0}; {5, 3, 1, 5, 1, 3, -2, 5, 6, -3, 0, 0}; {4, 6, -4, 4, -3, 6, 0, 6, 6, 3, 0, 0}; {-4, 0, 4, 3, -2, 3, -1, -2, -5, 0, 0, 0}; {-5, -5, -5, 2, 6, -2, 6, 4, -3, 6, 0, 0}; {-2, -4, 6, 0, 5, -3, -5, 3, -4, -1, 0, 0}; {1, -2, -5, 0, 5, 0, 3, 2, 4, 6, 0, 0}; {2, -3, 4, -4, -5, 6, -1, -1, 3, 5, 0, 0}; {4, 0, -4, 2, 1, 4, -4, 3, 5, 0, 0, 0}; {3, -2, 5, -2, 0, -2, -3, 3, 3, -2, 0, 0}; {5, -1, 5, -2, 0, 0, -1, 0, -4, 6, 0, 0}; {6, 1, -3, 3, -4, 0, 4, 6, 6, 5, 0, 0}; {6, 0, -5, 1, 0, 2, 0, 0, 5, 5, 0, 0}; {-1, 6, 2, -2, 3, -4, 0, 3, 3, 3, 0, 0}; {-1, 5, 0, -5, 3, 2, 2, -5, -2, 1, 0, 0}; {1, 6, 0, -5, 4, -2, 0, 3, 3, 3, 0, 0}; {0, 0, 1, 3, 11, 7, 11, 4, 5, 0, 0, 7}; {6, -3, 1, -5, -2, -5, 3, -4, 6, 1, 0, 0}; {0, 2, 5, -2, 5, 3, 3, -3, 4, 0, 0, 0}; {-4, 1, -5, 4, -4, -5, -4, -2, 5, 4, 0, 0}; {2, 4, -5, 1, 5, 0, -5, 5, 3, -1, 0, 0}; {0, 0, 1, 5, 9, 2, 10, 3, 0, 8, 4, 4}; {-2, -1, 1, -5, 3, 6, 2, 0, -1, 6, 0, 0}; {0, 0, 1, 6, 3, -1, 4, 6, 1, 5, 0, 0}; {-5, 1, -4, -5, -1, 5, -5, -5, -4, 2, 0, 0}; {1, -5, 2, 1, 5, 0, 1, -3, -5, -4, 0, 0}; {-4, 0, 5, 2, -3, -4, 4, -2, 1, 1, 0, 0}; {0, 0, 1, 6, 11, 3, 10, 7, 4, 11, 2, 1}; {5, -1, 6, 6, 5, 2, -5, 4, 6, -4, 0, 0}; {-2, -5, 5, -4, 4, 6, 1, 6, -4, -4, 0, 0}; {-4, 3, -1, 0, 6, 6, -1, 3, -1, -1, 0, 0}; {0, 0, 1, 9, 0, 1, 6, 1, 8, 8, 5, 0}; {0, 0, 1, 9, 2, 5, 4, 8, 5, 1, 0, 6}; {-1, -5, 4, -4, 3, 5, 0, 6, -5, -1, 0, 0}; {0, 0, 1, 10, 1, 8, 11, 3, 2, 8, 7, 2}; {2, -4, 3, -5, -5, 5, -2, 0, 4, 4, 0, 0}; {2, -4, 3, -5, -5, 5, -1, 0, 3, 4, 0, 0}; {0, 0, 2, 0, 8, 9, 6, 10, 3, 9, 9, 2}; {-3, 1, -5, -2, -2, 3, -1, 6, 5, 1, 0, 0}; {3, -4, 3, -4, 5, 5, 2, 2, -4, -3, 0, 0}; {-1, 0, 3, 4, -1, -5, 2, -5, 2, 3, 0, 0}; {-5, 0, -5, 1, 3, -4, -4, 2, 1, 0, 0, 0}; {4, -5, 0, 4, 2, 6, 3, -4, 6, 4, 0, 0}; {0, 4, -2, 4, -3, -4, -1, -2, 6, 5, 0, 0}; {5, -4, 1, 6, 1, -1, 1, 0, 6, 3, 0, 0}; {-1, 6, 3, 1, 6, -1, -2, 0, -5, -1, 0, 0}; {3, 6, -1, 5, 0, -2, 0, -2, -4, -5, 0, 0}; {3, -3, 5, 2, 2, -3, 1,

-5, -3, -1, 0, 0}; {4, -5, 0, -5, -4, 0, 2, 1, 5, 1, 0, 0}; {-3, 0, 5, 0, -5, -3, -5, 3, 0, -2, 0, 0}; {0, 0, 2, 7, 6, 4, 11, 8, 5, 9, 4, 7}; {-3, 0, 5, 2, -5, 3, -1, -2, 2, 2, 0, 0}; {-1, -1, 1, -4, 6, -3, 3, -2, -1, 5, 0, 0}; {3, 6, -1, -2, 3, -5, 3, 1, -2, 2, 0, 0}; {3, -1, -3, 1, 2, 5, 3, -5, 1, 4, 0, 0}; {0, 0, 2, 10, 4, 0, 11, 9, 6, 0, 3, 5}; {4, -2, 6, -3, -4, 6, 1, 0, 3, 6, 0, 0}; {-1, 0, 3, 1, 0, -5, -2, 5, 1, 6, 0, 0}; {0, 0, 2, 11, 10, 4, 6, 9, 3, 8, 2, 9}; {0, 0, 2, 11, 11, 5, 6, 2, 5, 10, 6, 1}; {-5, -2, 4, 4, -2, 3, 0, -2, -4, 0, 0, 0}; {6, 6, -3, -5, 3, -2, 2, -4, 3, 5, 0, 0}; {0, -4, -5, 1, -5, -2, 5, -4, -5, -1, 0, 0}; {-4, 4, 3, -2, 1, 5, -1, -4, -1, -2, 0, 0}; {2, -5, 3, -4, 3, 3, 6, -5, 4, 5, 0, 0}; {0, 0, 3, 3, 7, 1, 5, 3, 1, 11, 7, 11}; {0, 0, 3, 3, 11, 8, 5, 7, 3, 6, 11, 4}; {1, 6, 2, -4, -2, 0, -2, -1, 4, 3, 0, 0}; {0, 0, 3, 4, 11, 1, 7, 10, 5, 11, 6, 3}; {2, -2, -3, -5, 0, 5, -4, -4, 1, -3, 0, 0}; {-3, 5, 4, 3, -3, 2, 5, -5, 0, -3, 0, 0}; {0, 0, 3, 6, 5, 2, 7, 4, 3, 1, 7, 0}; {-3, 1, -4, 3, 6, -2, -3, 5, 1, -1, 0, 0}; {-1, 2, -4, 2, -4, 6, 1, 2, -2, -2, 0, 0}; {-1, 2, -4, 2, -4, -4, -1, -2, 4, 2, 0, 0}; f 0, 0, 3, 8, 2, 2, 9, 7, 6, 2, 6, 3}; {0, 0, 3, 8, 10, 7, 4, 3, 8, 4, 8, 6}; {3, 2, 4, -3, 6, -1, 5, 0, 1, 5, 0, 0}; {2, 1, 3, -4, 5, -2, 5, 0, 1, 5, 0, 0}; {-5, 3, 2, 5, 3, 0, 4, -3, 5, -4, 0, 0}; {-3, 0, 6, 5, 0, 2, -4, 4, -1, -1, 0, 0}; {0, 0, 4, 0, 6, 1, 9, 7, 6, 2, 5, 8}; {-2, 1, -4, -4, 4, -4, 3, -1, -4, -2, 0, 0}; {0, 0, 4, 1, 8, 3, 5, 3, 2, 9, 11, 4}; {5, 1, 1, 6, -1, 2, -2, -5, -3, -3, 0, 0}; {-5, 4, 5, -1, 6, -5, 1, 5, 5, -2, 0, 0}; {6, 3, 4, 0, 6, 4, -2, 4, 6, -2, 0, 0}; {-5, 6, -3, -5, 3, -1, 2, -2, 3, 6, 0, 0}; {-2, 2, -2, 1, 5, -2, -2, 6, 4, -1, 0, 0}; {-5, -1, -5, -2, 4, -1, -4, 4, 5, 6, 0, 0}; {6, 6, -2, -3, 4, -2, 5, -3, 3, 3, 0, 0}; {3, 3, -5, -5, 1, -3, 3, -4, 2, 3, 0, 0}; {1, 4, -1, 4, -3, -3, 0, -2, 6, 2, 0, 0}; {6, 1, 0, -2, 3, -5, -2, -3, 2, -2, 0, 0}; {3, -5, 3, -1, -5, 6, 2, 5, -2, 0, 0, 0}; {0, 1, 6, -1, 6, 3, 4, -1, -2, 2, 0, 0}; {0, 0, 4, 8, 6, 2, 2, 11, 3, 4, 0, 5}; {-1, 6, 5, 4, -2, 1, -2, 0, 1, -4, 0, 0}; {6, -4, 2, -4, -1, 4, 1, -5, 3, 0, 0, 0}; {0, 4, 0, -4, 2, -2, -2, 6, -4, 0, 0, 0}; {0, 0, 4, 8, 10, 3, 11, 4, 2, 2, 11, 6}; {-3, 1, -3, 6, -4, 6, 5, -1, -5, -4, 0, 0}; {1, 3, -3, 4, 6, -3, 2, 0, 5, 1, 0, 0}; {0, 0, 4, 10, 2, 4, 7, 6, 10, 7, 5, 3}; {1, 4, -1, -3, -1, -4, 5, -2, -2, -5, 0, 0}; {0, 0, 4, 11, 11, 0, 11, 9, 3, 5, 2, 8}; {5, 1, 2, 6, 0, 2, -2, 6, -3, -4, 0, 0}; {3, -3, -4, -1, 3, -2, -5, -5, -1, 4, 0, 0}; {0, 0, 5, 2, 1, 2, 1, 9, 6, 10, 3, 8}; {0, 0, 5, 2, 1, 5, 2, 5, 0, 10, 0, 7}; {2, -4, -5, -1, 2, -4, -4, 4, -1, 1, 0, 0}; {5, 2, 4, -1, 5, 6, 1, 5, 5, -3, 0, 0}; {5, 0, 0, 5, -4, 3, 5, 1, -3, 0, 0, 0}; {0, -3, -1, -5, 2, -3, -4, 3, -5, -2, 0, 0}; {0, -4, -3, 4, -2, -5, 1, 6, -5, -1, 0, 0}; {-3, -5, -2, -4, 4, -4, 1, 6, -4, 6, 0, 0}; {3, 6, 2, 5, -5, 2, -2, 5, 5, 5, 0, 0}; {2, -4, -5, 1, 1, -5, 2, 6, 1, 1, 0, 0}; {-4, 2, 1, -4, -2, 3, -3, 6, -2, 0, 0, 0}; {-5, 4, 6, 4, -3, 0, -4, 2, 2, -4, 0, 0}; {-3, -1, 6, -3, 1, 0, 4, 2, -5, 3, 0, 0}; {-1, 4, 2, -3, -4, 0, 6, -2, 2, 0, 0, 0}; {-1, 0, 6, -3, 6, -2, 6, -1, -4, 6, 0, 0}; {-3, -1, 6, -2, 3, 1, 0, 5, 3, -2, 0, 0}; {-4, -1, -5, 1, 0, 5, 0, 3, 5, 4, 0, 0}; {0, -1, 3, 5, 4, -1, 4, 5, 0, 4, 0, 0}; {-1, -1, 4, -5, -4, 3, -2, 1, -3, 2, 0, 0}; {2, -4, -4, -1, 2, -3, -4, 4, -1, 2, 0, 0}; {-3, -5, -1, -5, 4, 3, -3, -1, 5, -2, 0, 0}; {-3, 1, -1, 1, 5, 1, -3, 5, 3, 4, 0, 0}; {-2, -3, 2, -1, 3, 4, -3, 2, 5, 2, 0, 0}; {-4, -5, 0, -2, -4, -3, 3, 6, 2, -5, 0, 0}; {0, 0, 6, 5, 8, 6, 6, 8, 1, 6, 11, 7}; {-5, 5, -3, 6, -4, 1, -3, 1, 4, 6, 0, 0}; {-4, 1, 0, 5, 1, 4, -2, 4, 4, 1, 0, 0}; {6, -3, 6, -3, 3, 6, -5, -1, -5, 4, 0, 0}; {4, 2, 6, 4, 6, 0, -4, 0, 3, 6, 0, 0}; {-4, 2, 2, -4, 6, -1, 4, -1, 0, 0, 0, 0}; {-4, 6, -2, -3, 1, -5, 0, 3, 6, 3, 0, 0}; {0, 0, 6, 7, 5, 5, 0, 4, 6, 3, 10, 4}; {-4, -1, -4, 1, -3, 2, 3, -3, 4, 3, 0, 0}; {4, -5, 4, -3, 2, 4, -2, -4, 4, 0, 0, 0}; {-2, 4, 4, 1, -2, 3, 4, -4, 1, -2, 0, 0}; {4, -5, 4, -2, -2, 3, -2, 1, 4, 3, 0, 0}; {0, 0, 6, 9, 6, 10, 5, 9, 8, 1, 11, 9}; {0, 0, 6, 9, 11, 3, 11, 3, 0, 1, 9, 4}; {0, 0, 6, 10, 2, 1, 4, 0, 8, 8, 11, 8}; {-2, -3, 2, 6, 1, -5, -3, 3, 1, -2, 0, 0}; {6, 4, -3, 2, -2, 5, 5, -2, 0, 3, 0, 0}; {4,2,-5, 0, -3, 6, 0, 2, -4, 0, 0, 0}; {3, 0, 4, -2, 0, 6, 0, -3, -5, -3, 0, 0}; {0, 0, 7, 5, 0, 9, 2, 9, 3, 6, 4, 5}; {-3, 5, -4, 2, 2, -2, 2, -1, -4, -3, 0, 0}; {-2, -3, 3, 1, -4, -3, 4, -4, 2, -2, 0, 0}; {-1, 6, -4, 2, -5, 3, 0, -4, -3, -2, 0, 0}; {-3, 2, 2, 6, -1, -5, 3, 3, 0, 3, 0, 0}; {0, 0, 7, 6, 9, 3, 3, 1, 3, 5, 1, 5}; {-3, -5, 0, -2, 2, 4, -3, 2, 5, 2, 0, 0}; {1, -3, 0, -4, 1, -2, -4, 4, -5, -3, 0, 0}; {-3, 6, -2, -5, -4, 2, -2, 1, 4, 6, 0, 0}; {0, 0, 7, 8, 2, 1, 9, 4, 9, 7, 8, 10}; {0, 3, 1, 5, -2, 3, 4, -3, 5, 2, 0, 0}; {-2, 4, 5, 1, -2, 4, 4, -4, 1, -1, 0, 0}; {-5, 0, 0, -5, 4, -3, -5, -1, 3, 0, 0, 0}; {4,-1, 1, -2, 6, -3, -5, -1, -1, -5, 0, 0}; {-4, 0, -1, 6, 0, 1, -5, 3, 5, 1, 0, 0}; {0, 0, 7, 11, 5, 3, 6, 3, 0, 0, 4, 3}; {0, 0, -5, -1, 6, -4, 1, -3, 6, -1, 0, 0}; {0, 0, 7, 11, 10, 11, 4, 3, 7, 0, 8, 8}; {-4, 5, -2, 0, 6, -4, 5, 2, -3, 0, 0, 0}; {0, 4, 4, 2, 2, -3, -1, 4, -2, -5, 0, 0}; {0, 0, 8, 3, 3, 2, 4, 10, 2, 0, 8, 0}; {2, 1, -4, 2, 3, -3, 3, 6, 4, -2, 0, 0}; {4, 2, -4, 2, 5, 1, 6, 5, 5, 6, 0, 0}; {1, -3, 1, 6, 6, -3, 1, 0, -2, 3, 0, 0}; {2, -1, 4, -1, 6, 5, 1, 2, -4, -1, 0, 0}; {4, 2, -4, 4, 1, 5, -4, 4, 6, 0, 0, 0}; {1, -3, 1, -4, 0, -3, -3, 0, 6, 6, 0, 0}; {-3, 5, -3, 4, -2, -4, 6, 4, -5, -4, 0, 0}; {-2, -5, 0, -4, 6, 5, -4, -1, 5, -3, 0, 0}; {0, 0, 8, 8, 0, 10, 8, 2, 7, 2, 9, 0}; {3, -3, -1, 5, 5, 1, 5, 1, -3, -1, 0, 0}; {-4, -5, 2, 1, 6, -3, 3, -3, 1, -1, 0, 0}; {0, 0, 8, 8, 2, 8, 3, 10, 2, 0, 2, 4}; {6, -2, -2, 2, 3, -2, 3, -3, 3, 2, 0, 0}; {-5, 6, 1, 0, 2, -1, 4, -1, 2, -5, 0, 0}; {-2, 1, 0, 3, -3, -1, 5, -2, -5, 4, 0, 0}; {-3, 1, 1, 6, 3, -1, 4, 6, 3, 2, 0, 0}; {6, -1, 0, 6, 5, -4, 2, -3, 1, 0, 0, 0}; {-3, 3, 5, 0, -4, 1, -2, -4, -3, -4, 0, 0}; {-4, 0, 0, 6, 0, -5, -2, -4, -4, 5, 0, 0}; {0, 0, 8, 10, 0, 7, 2, 0, 4, 8, 6, 9};

{4, 1, 6, 5, -3, 5, -2, 2, 5, 2, 0, 0}; {0, 0, 8, 11, 9, 4, 11, 2, 6, 5, 5, 10}; {0, 0, 9, 0, 5, 10, 10, 10, 3, 11, 5, 3}; {-4, 6, 1, 2, -4, 4, -3, -1, 2, -1, 0, 0}; {-1, 5, -4, 6, 1, 6, 4, -4, -3, 3, 0, 0}; {0, 0, 9, 2, 3, 1, 9, 1, 10, 5, 6, 9}; {3, 3, 0, 5, -5, 4, -3, 2, 1, 6, 0, 0}; {-5, 2, 6, -5, -4, -2, 4, -3, 5, 3, 0, 0}; {0, 0, 9, 3, 10, 3, 4, 1, 4, 9, 10, 1}; {-5, 4, -2, 2, -3, -1, 3, 3, -1, -2, 0, 0}; {-2, -3, 5, -1, -2, 3, -4, 3, -5, 0, 0, 0}; {6, 5, 1, -5, -5, 0, 5, 1, 6, -1, 0, 0}; {5, 4, 0, -5, 3, -4, 2, 5, -4, 0, 0, 0}; {-1, 6, -2, 1, -3, -2, -5, 4, -5, -5, 0, 0}; {0, 0, 9, 5, 10, 0, 5, 1, 6, 6, 8, 4}; {3, -2, 2, 5, 5, 5, 6, 1, 6, 4, 0, 0}; {0, 0, 9, 5, 11, 11, 0, 4, 8, 3, 6, 7}; {-4, 3, -5, -1, -5, -4, 6, 4, -5, -5, 0, 0}; {3, -5, -4, -3, 3, -2, -5, 5, 0, 3, 0, 0}; {0, -5, -1, 4, 4, 0, 3, 1, -3, -3, 0, 0}; {0, 5, -5, -2, -1, -3, -4, 3, -3, 3, 0, 0}; {0, 0, 9, 8, 2, 5, 0, 6, 7, 11, 9, 2}; {-2, -2, -5, 6, 0, 5, -1, 4, -3, -3, 0, 0}; {2, -2, 3, -2, 4, 5, 2, 2, 5, 5, 0, 0}; {3,-3, 0, 6, 5, 1, 4, 1, -3, -2, 0, 0}; {2,-2, 3, -1, 6, 5, 1, 2, -4, -1, 0, 0}; {-5, -1, 0, 4, -2, 5, 2, 2, -2, 2, 0, 0}; {4, -5, -5, -1, 4, -1, 2, 0, -2, 5, 0, 0}; {1, 3, 2, 6, 0, -5, -1, -1, 5, 3, 0, 0}; {-5, 2, 6, 3, 4, 6, -1, 0, -3, 6, 0, 0}; {6, -3, -2, 3, -3, 4, -3, -2, 6, 2, 0, 0}; {-4, 0, 2, -3, 3, 0, 4, 6, 3, 1, 0, 0}; {0, 0, 10, 1, 8, 1, 4, 5, 10, 10, 4, 1}; {-4, 2, 6, 3, 4, 6, -1, 0, -3, 6, 0, 0}; {3, -2, 3, 2, -3, 2, 4, 5, -5, 1, 0, 0}; {0, 0, 10, 2, 3, 8, 9, 10, 6, 1, 7, 0}; {2, -4, 0, -2, 6, 6, 1, -4, -2, 0, 0, 0}; {-1, -1, -3, 1, -5, 4, 1, -1, 5, -3, 0, 0}; {1,-4, 1, 0, 2, -2, 2, 5, -5, 4, 0, 0}; {4, -1, 4, 4, -1, 0, -4, 5, -2, 0, 0, 0}; {4, 0, 6, -5, 4, -5, -1, 4, 3, -2, 0, 0}; {1, 6, -3, -4, 2, 6, 2, -1, -2, 2, 0, 0}; {3,-1, 5, -5, 6, -1, 2, 1, 0, 4, 0, 0}; {0, 5, -4, -4, 1, 6, 1, -2, -3, 2, 0, 0}; {0, 0, 10, 5, 5, 10, 3, 9, 10, 10, 2, 9}; {5, 3, -1, 4, 4, -1, 4, -5, 5, -2, 0, 0}; {3, 0, -5, 0, -5, -2, 1, 0, 3, 4, 0, 0}; {1, -1, -5, 2, -4, -3, -2, 4, -4, 0, 0, 0}; {0, 0, 10, 7, 3, 8, 3, 7, 6, 8, 11, 4}; {-3, 4, -3, 1, 5, 2, -1, 0, -2, -4, 0, 0}; {-3, 6, 1, -5, 1, 1, -1, 2, 5, -1, 0, 0}; {5, -3, -1, 1, -2, 5, 2, 3, 0, 4, 0, 0}; {-5, 4, -1, 6, -3, 6, 5, 3, -5, -2, 0, 0}; {1, 0, -3, -4, 1, 5, -2, 5, -2, -3, 0, 0}; {0, 0, 10, 11, 0, 2, 6, 10, 8, 3, 10, 3}; {-2, 4, -4, 3, -4, -5, -1, -1, 3, 3, 0, 0}; {-4, 2, -5, 2, -3, 6, 5, -2, 0, 2, 0, 0}; {-1, 6, 0, -4, -4, 2, 6, -4, -2, 1, 0, 0}; {0, 0, 11, 1, 3, 9, 8, 5, 1, 6, 0, 8}; {6, 1, -5, 4, 4, -1, 3, -5, -4, 0, 0, 0}; {-4, 2, -5, 3, 4, 6, 0, 0, -3, -5, 0, 0}; {0, 0, 11, 4, 1, 7, 8, 1, 3, 9, 0, 9}; {-1, 4, -4, -5, 1, 4, 2, -1, -3, 2, 0, 0}; {-1, 1, 2, -2, 2, -1, 3, -3, 6, 5, 0, 0}; {0, 0, 11, 6, 1, 0, 4, 7, 10, 5, 8, 4}; {-5, 2, -4, -2, 1, 3, -3, 5, 1, 1, 0, 0}; {-5, 3, -2, 1, -4, -1, 3, 3, -1, -2, 0, 0}; {-4, 4, -1, 3, -2, 1, 3, 2, 4, 5, 0, 0}; {3, -3, 2, 4, -3, 5, 3, 4, -1, -2, 0, 0}; {0, 0, 11, 7, 8, 4, 11, 10, 2, 2, 9, 2}; {5, 2, -2, 3, 1, 1, -4, -2, 5, -3, 0, 0}; {6, 3, -1, 5, -5, 3, 6, 5, 5, -2, 0, 0}; {1, -4, 2, 6, -4, 3, 1, 0, -2, -3, 0, 0}; {-5, 4, 0, -5, -5, 5, -5, 2, 5, -2, 0, 0}; {2, -1, -5, 2, 6, 3, 2, 2, -5, -2, 0, 0}; {0, 0, 11, 9, 4, 9, 3, 9, 3, 4, 8, 8}; {5, 1, -4, 2, -4, -1, 1, 0, 3, 4, 0, 0}; {6, 0, 5, -3, 5, 5, 5, 3, -3, -4, 0, 0}; {-5, 1, 6, 0, -4, 5, 5, -3, 0, 1, 0, 0}; {2, -2, 5, 1, 2, -3, 1, 6, -4, -1, 0, 0}; and {1, -4, 2, -3, -1, -2, -3, 0, 5, 6, 0, 0}; and

{0, 0, 0, 0, 3, 6, 0, 10, 6, 3, 8, 1}; {0, 0, 1, 3, 3, 9, 6, 2, 4, 11, 2, 9}; {0, 0, 3, 0, 9, 4, 3, 3, 9, 1, 8, 0}; {0, 0, 3, 1, 10, 11, 8, 2, 6, 1, 2, 7}; {0, 0, 3, 1, 11, 6, 7, 1, 4, 11, 7, 11}; {0, 0, 3, 6, 10, 8, 8, 3, 11, 9, 0, 8}; {0, 0, 3, 7, 1, 4, 7, 6, 4, 0, 5, 2}; {0, 0, 4, 8, 8, 3, 9, 0, 7, 1, 10, 10}; {0, 0, 6, 5, 3, 5, 1, 5, 1, 8, 1, 2}; {0, 0, 6, 6, 1, 3, 4, 4, 5, 0, 6, 0}; {0, 0, 6, 8, 1, 3, 1, 4, 9, 5, 11, 8}; {0, 0, 7, 8, 8, 6, 2, 9, 6, 10, 3, 9}; {0, 0, 7, 8, 10, 9, 11, 2, 9, 1, 8, 4}; {0, 0, 8, 4, 4, 9, 3, 0, 5, 11, 2, 2}; {0, 0, 8, 5, 7, 10, 2, 10, 0, 11, 4, 11}; {0, 0, 8, 6, 9, 3, 11, 3, 4, 0, 4, 5}; {0, 0, 9, 1, 3, 9, 9, 9, 3, 0, 5, 0}; {0, 0, 10, 0, 7, 11, 7, 4, 11, 11, 2, 5}; {0, 0, 10, 11, 2, 7, 8, 2, 10, 2, 8, 4}; and {0, 0, 11, 6, 5, 0, 8, 1, 0, 4, 10, 1}; and

mapping (S102) the sequence $\{f_n\}$ to N subcarriers to generate and send a first signal.

2. The signal processing method according to claim 1, wherein the mapping the sequence $\{f_n\}$ to N subcarriers comprises:

respectively mapping the N elements in the sequence $\{f_n\}$ to N consecutive subcarriers; or respectively mapping the N elements in the sequence $\{f_n\}$ to N equally spaced subcarriers.

3. A sequence-based signal processing method, wherein the signal processing method comprises:

receiving (S103) a first signal carried on N subcarriers, and obtaining N elements in a sequence $\{f_n\}$, wherein $f_n$ is an element in the sequence $\{f_n\}$, the sequence $\{f_n\}$ is a sequence that meets a preset condition, the preset condition is $f_n = A \cdot x_n \cdot e^{2\pi j \cdot a \cdot n}$, a value of n ranges from 0 to N-1, A is a non-zero complex number, $a$ is a real number, $j = \sqrt{-1}$, for an element $x_n$, $x_n = u \cdot e^{2\pi j \cdot s_n / M}$, M=12, u is a non-zero complex number, and a set that consists of a sequence $\{s_n\}$ consisting of an element $s_n$ comprises at least one of sequences in a first sequence set, wherein

the sequences in the first sequence set comprise some or all of the following sequences:

{-2, 4, -2, 4, 0, 2, 2, 0, 5, 5, 0, 0}; {-1, 6, 1, -4, -2, 4, -5, -5, 6, -5, 0, 0}; {3, -3, 3, -3, 0, -2, -2, 0, -5, -5, 0, 0}; {2, -4, 2, -4, -1, -2, -2, -1, -5, 6, 0, 0}; {-4, 2, -4, 3, -1, 1, 2, 1, 4, 5, 0, 0}; {0, 6, 0, -5, -2, -4, -3, -1, 6, 6, 0, 0}; {0, 6, 0, -5, -2, -3, -3, -1, 6, 6, 0, 0}; {-1, 5, -1, 6, -2, -3, -3, -1, 5, 5, 0, 0}; {-4, 2, -4, 4, -4, -5, -4, -2, 5, 5, 0, 0}; {-5, 1, -5, 3, -5, 6, -5, -3, 5, 5, 0, 0}; {4, -2, 4, 0, -4, -1, 0, -1, 3, 4, 0, 0}; {0, 4, -4, 2, -3, -2, -3, 4, 1, -2, 0, 0}; {-1, 3, -5, 1, -4, -3, -3, 4, 1, -2, 0, 0}; {0, 5, -2, 5, 2, 4, 3, 1, -3, -4, 0, 0}; {-3, 1, 5, -1, -5, -4, -5, 3, 0, -3, 0, 0}; {3, -3, 3, -1, 0, 6, -3, -3, -5, -4, 0, 0}; {1, 6, -1, 6, 6, 0, 2, 0, -3, -1, 0, 0}; {5, -2, 3, -2, 0, -1, 0, 0, -5, 6, 0, 0}; {-3, 3, -3, 5, -4, -4, -4, -2, 5, 5, 0, 0}; {-3, 0, 3, -3, 3, 1, 3, -5, 4, 1, 0, 0}; {-1, 4, -3, 5, 4, -2, 1, 0, -3, -2, 0, 0}; {3, -1, -5, -5, 1, -4, 0, 1, 4, -1, 0, 0}; {2, -2, 6, 6, 1, -5, 0, 1, 4, -1, 0, 0}; {0, -5, 2, 2, -5, 1, 4, 4, 6, 1, 0, 0}; {1, -3, 5, 6, 0, -5, -1, 1, 3, -1, 0, 0}; {-3, 4, -1, -1, 5, -1, 3, 4, 5, 0, 0, 0}; {-5, 1, -5, 6, -1, 4, -5, -5, -5, 1, 0, 0 1; {-2, 5, 0, 0, 6, 0, 3, 4, 5, 0, 0, 0}; {-5, 1, -5, 6, -1, 5, -5, 6, -5, 1, 0, 0}; {3, -3, 3, 3, -4, 2, 5, 5, 6, 0, 0, 0}; {-3, 3, -3, -3, 4, -2, -5, -5, 6, 0, 0, 0}; {4, -3, 2, 2, -4, 1, -2, -3, -5, 0, 0, 0}; {5, -1, 5, 6, 1, -5, 5, 6, 5, -1, 0, 0}; {5, -1, 5, 6, 1, -4, 5, 5, 5, -1, 0, 0}; {3, -4, 1, 1, -5, 1, -3, -4, -5, 0, 0, 0}; {-1, 3, -5, 6, 0, 5, 1, -1, -3, 1, 0, 0}; {0, 5, -2, -2, 5, -1, -4, -4, 6, -1, 0, 0}; {-2, 2, 6, 6, -1, 5, 0, -1, -4, 1, 0, 0}; {-2, 2, 6, 6, 0, 5, 1, -1, -3, 1, 0, 0}; {-3, 1, 5, 5, -1, 4, 0, -2, -4, 1, 0, 0}; {-3, 1, 5, 5, -1, 4, 0, -1, -4, 1, 0, 0}; {-2, 3, -4, -3, 4, -2, -5, -5, 6, -1, 0, 0}; {3, 0, -3, 3, -3, -1, -3, 5, -4, -1, 0, 0}; {4,-2, 4, -4, 4, 5, 4, 2, -5, -5, 0, 0}; {-5, 2, -3, 2, 0, 1, 0, 0, 5, 6, 0, 0}; {-1, 5, -1, 3, 5, 1, 1, 6, 5, -1, 0, 0}; {0, -5, 2, -5, -2, -4, -3, -1, 3, 4, 0, 0}; {4, -2, 4, -3, 6, 6, 4, 3, -5, -5, 0, 0}; {2, -4, 2, -5, 4, 5, 3, 2, -5, -5, 0, 0}; {-3, 3, -3, 2, 0, -5, 4, 3, -1, 0, 0, 0}; {0, 6, 0, 5, 3, 4, 3, 1, 6, 6, 0, 0}; {6, 0, 6, -1, 2, 0, -1, 0, -4, -5, 0, 0}; {-4, 4, 1, -4, -4, 0, 4, 0, 3, -1, 0, 0}; {-1, 5, 0, 5, 3, 3, 2, 1, 6, -5, 0, 0}; {-3, 2, -4, 0, -2, -4, -5, 4, -4, -4, 0, 0}; {-1, 6, 2, -4, -2, -3, 4, -5, -1, 2, 0, 0}; {5, -2, 4, -3, 5, 6, 5, 3, -5, -5, 0, 0}; {-1, 5, 0, 6, -3, -4, -4, -2, 6, 6, 0, 0}; {-5, 1, -4, 3, -5, 6, -5, -3, 5, 5, 0, 0}; {5, -3, 2, -5, -3, 6, 3, -4, 6, 0, 0, 0}; {3,-5, 0, 5, -4, 5, 2, -5, 5, 0, 0, 0}; {0, 5, -1, 5, 5, -2, -2, 2, 2, 2, 0, 0}; {-5, 0, 6, 0, 2, 0, 0, 1, -4, -5, 0, 0}; {-4, 1, -5, 3, -5, 6, -4, -3, 5, 5, 0, 0}; {-3, 1, 6, 1, -5, -4, -4, 3, 1, -2, 0, 0}; {6,-3, 1, -5, 1, 0, 1, 6, 3, 0, 0, 0}; {-5, -1, 4, 0, 3, -3, -4, 2, 0, -2, 0, 0}; {5, 0, -4, -4, 2, -3, 1, 2, 4, -1, 0, 0}; {3,-2, 6, 6, 1, -4, 0, 1, 4, -1, 0, 0}; {-1, 5, 0, 0, 5, 0, 4, 4, 5, 0, 0, 0}; {5, -1, 6, 6, -1, -2, 4, 6, 2, 0, 0, 0}; {-1, 5, 0, 0, 6, 0, 3, 4, 5, 0, 0, 0}; {-1, 4, -2, -2, 4, -1, -4, -4, 6, -1, 0, 0}; {-5, -1, 4, 3, -3, 3, -1, -2, -4, 0, 0, 0}; {-3, 1, 6, 5, -1, 4, 0, -2, -3, 1, 0, 0}; {-2, 3, -3, -3, 4, -2, -5, -5, 6, -1, 0, 0}; {-5, -1, 4, 3, -2, 3, -1, -2, -4, 0, 0, 0}; {-4, 1, -5, -5, 3, -3, 6, 6, 6, -1, 0, 0}; {6, -2, 3, 2, -3, 2, -1, -3, -4, 0, 0, 0}; {3, 6, -2, -3, 3, -5, 3, 1, -2, 2, 0, 0}; {-5, -1, 4, 4, -3, 3, -1, -2, -4, 1, 0, 0}; {6,-2, 3, 3, -3, 3, -1, -2, -4, 0, 0, 0}; {5, -3, 2, 2, -4, 2, -2, -3, -5, 0, 0, 0}; {5, 1, -2, 4, -2, 0, -3, 6, -4, -1, 0, 0}; {3, -2, 6, -1, 4, 5, 1, -2, -2, 0, 0, 0}; {5, -1, -5, -1, 1, 3, -3, 3, 3, 1, 0, 0}; {4, 1, 0, -5, 1, 6, 2, 2, 5, -3, 0, 0}; {3, -1, -3, 3, -3, -1, 6, -4, -5, -1, 0, 0}; {1,-3,-5, 1, -5, -2, 6, -5, 6, -3, 0, 0}; {2, -5, 2, -5, 4, 5, 3, 2, -5, -5, 0, 0}; {-1, 3, -3, 1, 0, 4, 1, -5, 6, 2, 0, 0}; {-2, 2, -4, 0, -1, 3, 1, 6, 5, 3, 0, 0}; {5, -1, -5, 2, -5, -1, 3, 5, 4, 4, 0, 0}; {5, -1, -5, 2, -5, -1, 3, 6, 5, 4, 0, 0}; {0, 4, -2, 3, 6, 4, 0, 6, 4, 0, 0, 0}; {-3, 3, -1, 6, -5, -2, -4, -2, 3, 3, 0, 0}; {-4, -1, 4, -3, -1, -5, 3, -4, 5, 0, 0, 0}; {-5, -2, 3, -4, -2, -5, 4, -4, 6, 0, 0, 0}; {0, 4, -2, 4, -2, -3, -1, -1, 4, 3, 0, 0}; {6, -3, 2, -5, 4, -5, -5, -3, 6, 3, 0, 0}; {6, -2, 4, -2, -4, 1, 0, 4, 4, 2, 0, 0}; {6, -2, 4, -2, -3, 2, 1, 5, 4, 2, 0, 0}; {4, -3, 4, 0, 0, 6, -5, -1, 1, -1, 0, 0}; {-1, 2, -5, 1, 0, 4, 3, 6, 5, 3, 0, 0}; {3, 5, -3, 2, 3, -1, 6, -1, -5, 1, 0, 0}; {-2, 1, 6, 0, -5, -4, -2, -2, 4, 2, 0, 0}; {-3, 2, -3, 6, -3, 3, 4, -1, -2, -3, 0, 0}; {1, 3, -5, 1, 2, -3, 4, -3, 5, 0, 0, 0}; {0, 2, 6, 0, 1, -3, 4, -3, 5, 0, 0, 0}; {-3, -1, 3, -2, 6, -2, -5, -3, -5, 5, 0, 0}; {0, 3, -4, -5, 1, 6, 1, 0, -3, 1, 0, 0}; {-4, 3, 0, 4, -4, -3, 4, 0, 0, -1, 0, 0}; {-4, 4, 2, -5, 0, 3, -2, -5, -2, 0, 0, 0}; {-5, 3, 1, 6, -1, 2, -2, -5, -2, 0, 0, 0}; {5, 1, 0, 5, -2, 2, -3, 6, -2, 0, 0, 0}; {-4, 4, 3, -3, 3, -5, 4, 5, 5, -4, 0, 0}; {4, -1, -3, 3, -3, -1, -5, -4, 6, -2, 0, 0}; {-1, 5, 2, -4, -4, 1, 5, -1, 1, 0, 0, 0}; {-3, 3, 0, 6, -5, -1, -5, -2, 3, 2, 0, 0}; {2, 6, 1, 6, 6, -1, -2, 4, 3, 1, 0, 0}; {-1, 2, -4, 0, 0, 4, 2, -5, 5, 2, 0, 0}; {-2, 4, 1, -4, 3, -5, -1, 4, 4, 3, 0, 0}; {-5, -1, 6, -1, -3, 1, 2, -5, 4, 2, 0, 0}; f 4, -4, 3, -4, -5, 0, -1, 4, 4, 1, 0, 0}; {4, -4, 3, -4, -5, 0, -1, 4, 4, 2, 0, 0}; {2, 5, -1, 3, 1, 5, 3, -4, 6, 3, 0, 0}; {1, 4, -2, 3, 1, 5, 3, -5, 6, 3, 0, 0}; {3, -4, 4, -1, -1, 5, 6, -1, 1, -1, 0, 0}; {-2, 1, -5, 0, -1, 3, 2, 6, 5, 3, 0, 0}; {-2, 4, 1, -3, 3, -5, 0, 3, 3, 3, 0, 0}; {6,-2, 5, -1, 5, 5, -4, -4, 5, 5, 0, 0}; {5, -3, 4, -2, 5, 5, -5, -4, 5, 5, 0, 0}; {5,-2, 6, 1, 0, 6, -5, 0, 2, 0, 0, 0}; {1, 4, -2, 3, 0, 4, 4, -4, 6, 3, 0, 0}; {0, 2, -5, 0, 1, -3, 4, -3, 5, 0, 0, 0}; {-2, 0, 5, -2, 0, -4, 4, -3, 6, 0, 0, 0}; {5, -5, 0, 6, 3, -5, 5, -4, 6, 5, 0, 0}; {-5, -2, 4, -1, 5, -4, -5, 3, 0, -2, 0, 0}; {-3, -1, 4, 2, 4, -1, 6, 1, 0, 4, 0, 0}; {5, -5, 1, -1, 2, -3, 4, -1, -1, 3, 0, 0}; {-2, -5, -4, 2, -3, 2, 0, 2, 3, -5, 0, 0}; {0, -5, 6, -1, 3, 6, 1, -3, -1, -1, 0, 0}; {5, 0, -1, 5, 5, -3, 3, -2, 1, 0, 0, 0}; {1, -4, -5, 1, 3, -5, 1,

-3, 0, -1, 0, 0}; {-5, 2, 1, -5, -2, 3, -3, 6, -2, 0, 0, 0}; {0, 6, 4, -2, -4, 1, 5, -1, 1, 1, 0, 0}; {-1, 4, 1, -5, -3, 3, 4, -1, 0, -2, 0, 0}; {-2, 4, 2, -3, 1, 5, 4, 5, -1, 2, 0, 0}; {-3, -1, 5, -2, -1, -5, 3, -4, 5, -1, 0, 0}; {-5, -3, 3, -4, -2, 6, 1, -5, 4, -1, 0, 0}; {6, -5, 0, 4, 5, 0, -5, -1, -5, 1, 0, 0}; {0, 4, 0, -5, -1, 4, 5, 1, -1, -3, 0, 0}; {2, -3, -3, 3, 5, 1, -4, 1, -2, -1, 0, 0}; {-3, 3, 2, -4, -3, 5, -1, 3, 0, 0, 0, 0}; {-4, 2, 1, -5, -4, 4, -2, 2, 0, 0, 0, 0}; {-3, -1, 6, -4, 6, -2, 5, -1, -4, 5, 0, 0}; {1, -4, -4, 3, 2, 6, 0, -3, 0, -1, 0, 0}; {-1, 5, 4, -2, -4, 0, 5, 0, 2, 1, 0, 0}; {0,-5, -5, 2, 1, 6, 0, -4, -1, -1, 0, 0}; {-1, 6, 6, 1, 1, 6, 0, -4, -1, -1, 0, 0}; {-4, 2, 1, -5, 6, -1, 3, -2, 1, 0, 0, 0}; {-3, 4, 4, -1, -1, 5, -2, 6, -2, -2, 0, 0}; {-4, 3, 3, -2, -2, 4, -2, 6, -2, -1, 0, 0}; {-4, 3, 3, -2, -1, 4, -2, -5, -1, -1, 0, 0}; {-5, 1, 0, 6, 6, -2, 4, -1, 1, 0, 0, 0}; {-4, 3, 3, -2, -1, 4, -1, -5, -1, -1, 0, 0}; {3, 5, 0, 3, -4, 4, 2, -5, 5, -1, 0, 0}; {-3, 3, 2, -3, 6, -3, 3, 0, 1, -1, 0, 0}; {1, 4, 0, -5, -1, 4, 5, 1, -1, -4, 0, 0}; {-3, -2, 4, -2, -1, -5, 2, -5, 4, -1, 0, 0}; {-4, 2, 2, -5, -3, 4, -2, 3, 0, 0, 0, 0}; {5, -3, -5, -1, -3, 4, -4, -3, 5, 4, 0, 0}; {-5, 3, 5, 1, 3, -4, 4, 3, -5, -4, 0, 0}; {6, 0, 0, 6, -5, 3, -2, 2, -1, 0, 0, 0}; {6, 0, 0, 6, -5, 3, -2, 3, -1, 0, 0, 0}; {-4, 2, 2, -4, 6, -2, 4, -1, 1, 1, 0, 0}; {-5, 1, 1, -5, 5, -3, 3, -2, 1, 1, 0, 0}; {6, 0, 0, 6, 5, -3, 2, -2, 1, 0, 0, 0}; {6, 0, 0, 6, 5, -3, 3, -2, 1, 0, 0, 0}; {4, -2, -2, 5, 3, -4, 2, -3, 0, 0, 0, 0}; {6, 3, -5, 2, -4, 6, 5, 3, 6, -5, 0, 0}; {-3, -5, 0, -3, 4, -4, -2, 5, -5, 1, 0, 0}; {-4, 3, 5, -1, -5, 2, 6, -5, 0, 0, 0, 0}; {4, -2, -1, 5, 4, -4, 2, -2, 0, 0, 0, 0}; {-1, 4, 4, -3, -2, 6, 0, 3, 0, 1, 0, 0}; {0, -5, -3, 4, -4, 5, 1, -5, -5, -2, 0, 0}; {5, -2, -2, 3, 0, 4, -4, 3, 1, 2, 0, 0}; {0, 6, -5, 2, 0, 5, 0, -4, -1, 0, 0, 0}; {-2, 3, 3, -3, -5, -1, 4, -1, 2, 1, 0, 0}; {3, -4, -4, 2, -2, 1, -5, 3, 1, 1, 0, 0}; {2, -4, -3, 4, 1, 6, 1, -3, -1, 0, 0, 0}; {0, 4, 3, -4, 3, 6, -1, 6, 4, 2, 0, 0}; {-5, 5, -1, 1, -2, 3, -4, 1, 1, -3, 0, 0}; {-1, -3, 3, -4, 6, 3, -2, 0, -5, -1, 0, 0}; {-4, 4, -4, 1, -5, -4, 6, 4, -5, -5, 0, 0}; {6, 5, 0, -4, -5, 0, 5, 1, 5, -1, 0, 0}; {5, 3, -3, 4, 2, 6, -1, 5, -4, 1, 0, 0}; {3, 1, -5, 2, 1, 5, -3, 4, -5, 1, 0, 0}; {4, -1, 2, -5, 0, -1, -3, -5, -4, -3, 0, 0}; {3, -2, 1, -5, 1, -2, -4, 6, -5, -3, 0, 0}; {-4, 1, 2, -5, -4, 4, -2, 5, 0, 1, 0, 0}; {2, -4, -2, 4, 0, 5, -3, -3, 1, -1, 0, 0}; {5,-2,-1, 5, 2, -3, 3, 6, 2, 0, 0, 0}; {2, 5, 4, -2, 3, -2, 0, -2, -3, 5, 0, 0}; {-5, -1, 0, -5, 2, -2, 3, 6, 2, 0, 0, 0}; {3, 1, -4, -2, -4, 1, 6, -1, 0, -4, 0, 0}; {2,-1, 5, -2, -5, 5, 0, 1, -4, -1, 0, 0}; {2, 0, -5, 2, 0, 4, -4, 3, 6, 0, 0, 0}; {0, -2, 5, 0, -1, 3, -4, 3, -5, 0, 0, 0}; {4,-1, 3, -4, 2, -1, -4, 6, -5, -4, 0, 0}; {2, -4, -1, 3, -3, 5, 0, -3, -3, -3, 0, 0}; {4,-2, 1, 6, 0, -1, -3, -5, -4, -3, 0, 0}; {-1, 5, -4, 1, -5, 3, -1, -4, -4, -3, 0, 0}; {-2, 4, -5, 0, 6, 2, -1, -4, -4, -3, 0, 0}; {3, -3, 0, 6, 5, 1, 5, 2, -3, -2, 0, 0}; {5, 2, -4, 5, 1, 5, -4, 4, 6, 0, 0, 0}; {3, 3, 0, 1, -5, 0, 6, 2, -4, -4, 0, 0}; {4, -4, -3, 3, -3, 5, -4, -5, -5, 4, 0, 0}; {-1, 3, 5, -1, 5, 2, 6, 5, 6, 3, 0, 0}; {-3, 1, 3, -3, 3, 1, 6, 4, 5, 1, 0, 0}; {-4, -1, 0, 5, -1, 6, -2, -2, -5, 3, 0, 0}; {-5, -1, 1, -4, 2, -1, 3, 6, 4, 1, 0, 0}; {5, -3, -1, 6, 1, -2, 2, 5, 2, 0, 0, 0}; {4, -4, -2, 5, 0, -3, 2, 5, 2, 0, 0, 0}; {4, -3, 0, -4, 4, 3, -4, 0, 0, 1, 0, 0}; {4, -2, 2, -1, -1, 6, -1, -3, -5, -4, 0, 0}; {0, -3, 4, 5, -1, 6, -1, 0, 3, -1, 0, 0}; {0,-2, 6, 0, -1, 3, -4, 3, -5, 0, 0, 0}; {-1,-3, 5, -1, -2, 3, -4, 3, -5, 0, 0, 0}; {-5, 2, -5, -1, 6, -5, 6, 4, -5, -5, 0, 0}; {-5, 3, -3, 2, -2, 0, 1, 0, 4, 5, 0, 0}; {-3, -5, 3, -2, -3, 1, 6, 1, 5, -1, 0, 0}; {-3, 5, -1, 5, -1, 1, 2, 1, 4, 5, 0, 0}; {-4, 4, -2, 4, -2, 1, 2, 1, 4, 5, 0, 0}; {-5, 3, -3, 3, -2, 0, 1, 0, 4, 5, 0, 0}; {4, -1, 4, -3, 4, 5, 5, 3, 6, 6, 0, 0}; {1, -4, 1, 6, 1, 2, 6, 5, 1, -1, 0, 0}; {2, -3, 2, -5, 3, 4, 4, 2, 6, 6, 0, 0}; {5, 2, -3, 4, 2, 5, -4, 4, 6, 0, 0, 0}; {4, 1, -4, 3, 1, 5, -3, 4, -5, 0, 0, 0}; {-5, 3, -3, 5, 3, -5, -3, 4, 6, 0, 0, 0}; {-2, 6, 0, -4, 4, -5, -2, 5, -5, 0, 0, 0}; {3, -2, 3, -1, 0, 6, -2, -3, -5, -4, 0, 0}; {0, -5, 0, -4, 1, 3, 2, 1, 5, 5, 0, 0}; {-1, 6, 0, -4, 3, 2, 2, -4, -1, 2, 0, 0}; {6, 1, -5, 3, -5, 6, -5, -2, 3, 4, 0, 0}; {-1, 5, -2, 6, -1, 2, 2, 0, 4, 4, 0, 0}; {-3, 2, 6, 1, -4, -5, -1, 2, 2, 0, 0, 0}; {-5, -1, 2, -4, 2, 0, 3, 6, 4, 1, 0, 0}; {5, -1, 4, 1, -2, -3, 3, -4, -2, -1, 0, 0}; {0,-4, 3, 3, -4, -4, 0, 4, 0, 1, 0, 0}; {-5, 3, -2, -2, 4, -2, 2, 3, 5, 0, 0, 0}; {6, 2, -3, -3, 3, -3, 1, 2, 4, 0, 0, 0}; {5, 1, -4, -4, 3, -3, 1, 2, 4, -1, 0, 0}; {6, 2, -3, -2, 3, -2, 1, 3, 4, 0, 0, 0}; {4, -1, 5, 5, -3, 3, 6, 6, 6, 1, 0, 0}; {5, 1, -4, -3, 2, -3, 1, 2, 4, 0, 0, 0}; {5, 1, -4, -3, 3, -3, 1, 2, 4, 0, 0, 0}; {2, -3, 3, 3, -4, 2, 5, 5, 6, 1, 0, 0}; {1, -4, 2, 2, -4, 1, 4, 4, 6, 1, 0, 0}; {1, -5, 0, 0, 6, 0, -3, -4, -5, 0, 0, 0}; {-5, 1, 6, 6, 1, 2, -4, 6, -2, 0, 0, 0}; {1,-5, 0, 0, -5, 0, -4, -4, -5, 0, 0, 0}; {-3, 2, 6, 6, -1, 4, 0, -1, -4, 1, 0, 0}; {-5, 0, 4, 4, -2, 3, -1, -2, -4, 0, 0, 0}; {6, -1, 3, 3, -2, 3, -1, -3, -4, 1, 0, 0}; {-1,-3,6, 0, 3, -1, 2, 3, 3, -4, 0, 0}; {6, 3, -1, 5, -1, 0, -1, 6, -3, 0, 0, 0}; {6, 2, -3, 2, -4, -1, 3, 4, -1, -1, 0, 0}; {3, -2, 4, -4, 3, 4, 5, 3, 6, 6, 0, 0}; {4,-1, 5, -3, 5, 6, 4, 3, -5, -5, 0, 0}; {1,-4,2, 6, 2, 3, 4, 2, 6, 6, 0, 0}; {1, -4, 2, -5, 3, 4, 3, 2, 6, 6, 0, 0}; {-2, 5, -1, 4, 1, 2, 2, 1, 5, 6, 0, 0}; {5, -1, 4, -3, 5, 6, 5, 3, -5, -5, 0, 0}; {-5, 3, -2, 5, 3, 6, -3, 4, 6, 0, 0, 0}; {-3, 4, -2, 4, -1, 1, 2, 1, 4, 5, 0, 0}; {-5, 2, -4, 2, -2, 0, 1, 0, 4, 5, 0, 0}; {-3, 5, 0, -5, 4, -5, -2, 5, -5, 0, 0, 0}; {6, 0, 5, -1, -5, -5, 5, 4, -4, -4, 0, 0}; {2,-4, 1, -5, 3, 4, 4, 2, 6, 6, 0, 0}; {2,-4, 1, -5, 4, 4, 4, 2, 6, -5, 0, 0}; {-1, 6, 0, -5, -2, -4, -3, -1, 5, 5, 0, 0}; {-1, 6, 0, -5, -2, -3, -3, -1, 5, 5, 0, 0}; {-4, 3, -3, 4, -4, -5, -4, -2, 5, 5, 0, 0}; {-5, 2, -4, 3, -5, 6, -5, -3, 5, 5, 0, 0}; {-5, 2, -4, 3, -4, -5, -5, -1, 2, 4, 0, 0}; and {-2, 5, -1, 6, -1, 2, 3, 1, 4, 5, 0, 0};

{-3, 2, -5, 0, -1, -3, -5, 5, -3, -4, 0, 0}; {6, 0, 6, 0, 4, -5, -4, 2, 0, -2, 0, 0}; {0, 0, 0, 1, 10, 8, 5, 0, 4, 9, 10, 2}; {1, -5, 1, -3, -5, -1, -1, 6, -5, 1, 0, 0}; {-4, 1, 6, 1, -2, 6, 0, 2, 4, 3, 0, 0}; {-3, 1, 5, 0, -5, -3, -4, 3, 0, -2, 0, 0}; {4, 5, 6, -2, 3, -1, 4, -1, -2, 4, 0, 0}; {-4, -1, 2, -4, 6, -2, -4, -5, -4, 3, 0, 0}; {-2, 3, -4, 4, 5, 6, 1, 1, -3, -5, 0, 0}; {0, 0, 0, 4, 8, 11, 9, 6, 10, 5, 0, 11}; {2, -4, 2, 1, 6, 4, -5, -1, 3, 1, 0, 0}; {5, 3, 1, 5, 1, 3, -2, 5, 6, -3, 0, 0}; {4, 6, -4, 4, -3, 6, 0, 6, 6, 3, 0, 0}; {-4, 0, 4, 3, -2, 3, -1, -2, -5, 0, 0, 0}; {-5, -5, -5, 2, 6, -2, 6, 4, -3, 6, 0, 0}; {-2, -4, 6, 0, 5, -3, -5, 3, -4, -1, 0, 0}; {1, -2, -5, 0, 5, 0, 3, 2, 4, 6, 0, 0}; {2, -3, 4, -4, -5, 6, -1, -1, 3, 5, 0, 0}; {4, 0, -4, 2, 1, 4, -4, 3, 5, 0, 0, 0}; {3,-2, 5, -2, 0, -2, -3, 3, 3, -2, 0, 0}; {5, -1, 5, -2, 0, 0, -1, 0, -4, 6, 0, 0}; {6, 1, -3, 3, -4, 0, 4, 6, 6, 5, 0, 0}; {6, 0, -5, 1, 0, 2, 0, 0, 5, 5, 0, 0}; {-1, 6, 2, -2, 3, -4, 0, 3, 3, 3, 0, 0}; {-1, 5, 0, -5, 3, 2, 2, -5, -2, 1, 0, 0}; {1, 6, 0, -5, 4, -2, 0, 3, 3, 3, 0, 0}; {0, 0, 1, 3, 11, 7, 11, 4, 5, 0, 0, 7}; {6, -3, 1, -5, -2, -5, 3, -4, 6, 1, 0, 0}; {0, 2, 5, -2, 5, 3, 3, -3, 4, 0, 0, 0}; {-4, 1, -5, 4, -4, -5, -4, -2, 5, 4, 0, 0}; {2, 4, -5, 1, 5, 0, -5, 5, 3, -1, 0, 0}; {0, 0, 1, 5, 9, 2, 10, 3, 0, 8, 4, 4}; {-2, -1, 1, -5, 3, 6, 2, 0, -1, 6, 0, 0}; {0, 0, 1, 6, 3, -1, 4, 6, 1, 5, 0, 0}; {-5, 1, -4, -5, -1, 5, -5, -5, -4, 2, 0, 0}; {1, -5, 2, 1, 5, 0, 1, -3, -5, -4, 0, 0}; {-4,0, 5, 2, -3, -4, 4, -2, 1, 1, 0, 0}; {0, 0, 1, 6, 11, 3, 10, 7, 4, 11, 2, 1}; {5, -1, 6, 6, 5, 2, -5, 4, 6, -4, 0, 0}; {-2, -5, -5, -4, 4, 6, 1, 6, -4, -4, 0, 0}; {-4, 3, -1, 0, 6, 6, -1, 3, -1, -1, 0, 0}; {0, 0, 1, 9, 0, 1, 6, 1, 8, 8, 5, 0}; {0, 0, 1, 9, 2, 5, 4, 8, 5, 1, 0, 6}; {-1, -5, 4, -4, 3, 5, 0, 6, -5, -1, 0, 0}; {0, 0, 1, 10, 1, 8, 11, 3, 2, 8, 7, 2}; {2, -4, 3, -5, -5, 5, -2, 0, 4, 4, 0, 0}; {2,-4, 3, -5, -5, 5, -1, 0, 3, 4, 0, 0}; {0, 0, 2, 0, 8, 9, 6, 10, 3, 9, 9, 2}; {-3, 1, -5, -2, -2, 3, -1, 6, 5, 1, 0, 0}; {3, -4, 3, -4, 5, 5, 2, 2, -4, -3, 0, 0}; {-1, 0, 3, 4, -1, -5, 2, -5, 2, 3, 0, 0}; {-5, 0, -5, 1, 3, -4, -4, 2, 1, 0, 0, 0}; {4, -5, 0, 4, 2, 6, 3, -4, 6, 4, 0, 0}; {0, 4, -2, 4, -3, -4, -1, -2, 6, 5, 0, 0}; {5,-4, 1, 6, 1, -1, 1, 0, 6, 3, 0, 0}; {-1, 6, 3, 1, 6, -1, -2, 0, -5, -1, 0, 0}; {3, 6, -1, 5, 0, -2, 0, -2, -4, -5, 0, 0}; {3,-3, 5, 2, 2, -3, 1, -5, -3, -1, 0, 0}; {4, -5, 0, -5, -4, 0, 2, 1, 5, 1, 0, 0}; {-3, 0, 5, 0, -5, -3, -5, 3, 0, -2, 0, 0}; {0, 0, 2, 7, 6, 4, 11, 8, 5, 9, 4, 7}; {-3, 0, 5, 2, -5, 3, -1, -2, 2, 2, 0, 0}; {-1, -1, 1, -4, 6, -3, 3, -2, -1, 5, 0, 0}; {3, 6, -1, -2, 3, -5, 3, 1, -2, 2, 0, 0}; {3, -1, -3, 1, 2, 5, 3, -5, 1, 4, 0, 0}; {0, 0, 2, 10, 4, 0, 11, 9, 6, 0, 3, 5}; {4, -2, 6, -3, -4, 6, 1, 0, 3, 6, 0, 0}; {-1, 0, 3, 1, 0, -5, -2, 5, 1, 6, 0, 0}; {0, 0, 2, 11, 10, 4, 6, 9, 3, 8, 2, 9}; {0, 0, 2, 11, 11, 5, 6, 2, 5, 10, 6, 1}; {-5, -2, 4, 4, -2, 3, 0, -2, -4, 0, 0, 0}; {6, 6, -3, -5, 3, -2, 2, -4, 3, 5, 0, 0}; {0, -4, -5, 1, -5, -2, 5, -4, -5, -1, 0, 0}; {-4, 4, 3, -2, 1, 5, -1, -4, -1, -2, 0, 0}; {2, -5, 3, -4, 3, 3, 6, -5, 4, 5, 0, 0}; {0, 0, 3, 3, 7, 1, 5, 3, 1, 11, 7, 11}; {0, 0, 3, 3, 11, 8, 5, 7, 3, 6, 11, 4}; {1, 6, 2, -4, -2, 0, -2, -1, 4, 3, 0, 0}; {0, 0, 3, 4, 11, 1, 7, 10, 5, 11, 6, 3}; {2, -2, -3, -5, 0, 5, -4, -4, 1, -3, 0, 0}; {-3, 5, 4, 3, -3, 2, 5, -5, 0, -3, 0, 0}; {0, 0, 3, 6, 5, 2, 7, 4, 3, 1, 7, 0}; {-3, 1, -4, 3, 6, -2, -3, 5, 1, -1, 0, 0}; {-1, 2, -4, 2, -4, 6, 1, 2, -2, -2, 0, 0}; {-1, 2, -4, 2, -4, -4, -1, -2, 4, 2, 0, 0}; f 0, 0, 3, 8, 2, 2, 9, 7, 6, 2, 6, 3}; {0, 0, 3, 8, 10, 7, 4, 3, 8, 4, 8, 6}; {3, 2, 4, -3, 6, -1, 5, 0, 1, 5, 0, 0}; {2, 1, 3, -4, 5, -2, 5, 0, 1, 5, 0, 0}; {-5, 3, 2, 5, 3, 0, 4, -3, 5, -4, 0, 0}; {-3, 0, 6, 5, 0, 2, -4, 4, -1, -1, 0, 0}; {0, 0, 4, 0, 6, 1, 9, 7, 6, 2, 5, 8}; {-2, 1, -4, -4, 4, -4, 3, -1, -4, -2, 0, 0}; {0, 0, 4, 1, 8, 3, 5, 3, 2, 9, 11, 4}; {5, 1, 1, 6, -1, 2, -2, -5, -3, -3, 0, 0}; {-5, 4, 5, -1, 6, -5, 1, 5, 5, -2, 0, 0}; {6, 3, 4, 0, 6, 4, -2, 4, 6, -2, 0, 0}; {-5, 6, -3, -5, 3, -1, 2, -2, 3, 6, 0, 0}; {-2,2,-2, 1, 5, -2, -2, 6, 4, -1, 0, 0}; {-5, -1, -5, -2, 4, -1, -4, 4, 5, 6, 0, 0}; {6, 6, -2, -3, 4, -2, 5, -3, 3, 3, 0, 0}; {3, 3, -5, -5, 1, -3, 3, -4, 2, 3, 0, 0}; {1, 4, -1, 4, -3, -3, 0, -2, 6, 2, 0, 0}; {6, 1, 0, -2, 3, -5, -2, -3, 2, -2, 0, 0}; {3, -5, 3, -1, -5, 6, 2, 5, -2, 0, 0, 0}; {0, 1, 6, -1, 6, 3, 4, -1, -2, 2, 0, 0}; {0, 0, 4, 8, 6, 2, 2, 11, 3, 4, 0, 5}; {-1, 6, 5, 4, -2, 1, -2, 0, 1, -4, 0, 0}; {6, -4, 2, -4, -1, 4, 1, -5, 3, 0, 0, 0}; {0, 4, 0, -4, 2, -2, -2, 6, -4, 0, 0, 0}; {0, 0, 4, 8, 10, 3, 11, 4, 2, 2, 11, 6}; {-3, 1, -3, 6, -4, 6, 5, -1, -5, -4, 0, 0}; {1, 3, -3, 4, 6, -3, 2, 0, 5, 1, 0, 0}; {0, 0, 4, 10, 2, 4, 7, 6, 10, 7, 5, 3}; {1, 4, -1, -3, -1, -4, 5, -2, -2, -5, 0, 0}; {0, 0, 4, 11, 11, 0, 11, 9, 3, 5, 2, 8}; {5, 1, 2, 6, 0, 2, -2, 6, -3, -4, 0, 0}; {3, -3, -4, -1, 3, -2, -5, -5, -1, 4, 0, 0}; {0, 0, 5, 2, 1, 2, 1, 9, 6, 10, 3, 8}; {0, 0, 5, 2, 1, 5, 2, 5, 0, 10, 0, 7}; {2, -4, -5, -1, 2, -4, -4, 4, -1, 1, 0, 0}; {5, 2, 4, -1, 5, 6, 1, 5, 5, -3, 0, 0}; {5, 0, 0, 5, -4, 3, 5, 1, -3, 0, 0, 0}; {0, -3, -1, -5, 2, -3, -4, 3, -5, -2, 0, 0}; {0, -4, -3, 4, -2, -5, 1, 6, -5, -1, 0, 0}; {-3, -5, -2, -4, 4, -4, 1, 6, -4, 6, 0, 0}; {3, 6, 2, 5, -5, 2, -2, 5, 5, 5, 0, 0}; {2, -4, -5, 1, 1, -5, 2, 6, 1, 1, 0, 0}; {-4, 2, 1, -4, -2, 3, -3, 6, -2, 0, 0, 0}; {-5, 4, 6, 4, -3, 0, -4, 2, 2, -4, 0, 0}; {-3, -1, 6, -3, 1, 0, 4, 2, -5, 3, 0, 0}; {-1, 4, 2, -3, -4, 0, 6, -2, 2, 0, 0, 0}; {-1, 0, 6, -3, 6, -2, 6, -1, -4, 6, 0, 0}; {-3, -1, 6, -2, 3, 1, 0, 5, 3, -2, 0, 0}; {-4, -1, -5, 1, 0, 5, 0, 3, 5, 4, 0, 0}; {0, -1, 3, 5, 4, -1, 4, 5, 0, 4, 0, 0}; {-1,-1, 4, -5, -4, 3, -2, 1, -3, 2, 0, 0}; {2, -4, -4, -1, 2, -3, -4, 4, -1, 2, 0, 0}; {-3, -5, -1, -5, 4, 3, -3, -1, 5, -2, 0, 0}; {-3, 1, -1, 1, 5, 1, -3, 5, 3, 4, 0, 0}; {-2, -3, 2, -1, 3, 4, -3, 2, 5, 2, 0, 0}; {-4, -5, 0, -2, -4, -3, 3, 6, 2, -5, 0, 0}; {0, 0, 6, 5, 8, 6, 6, 8, 1, 6, 11, 7}; {-5, 5, -3, 6, -4, 1, -3, 1, 4, 6, 0, 0}; {-4, 1, 0, 5, 1, 4, -2, 4, 4, 1, 0, 0}; {6, -3, 6, -3, 3, 6, -5, -1, -5, 4, 0, 0}; {4, 2, 6, 4, 6, 0, -4, 0, 3, 6, 0, 0}; {-4, 2, 2, -4, 6, -1, 4, -1, 0, 0, 0, 0}; {-4, 6, -2, -3, 1, -5, 0, 3, 6, 3, 0, 0}; {0, 0, 6, 7, 5, 5, 0, 0, 4, 6, 3, 10, 4}; {-4, -1, -4, 1, -3, 2, 3, -3, 4, 3, 0, 0}; {4, -5, 4, -3, 2, 4, -2, -4, 4, 0, 0, 0}; {-2, 4, 4, 1, -2, 3, 4, -4, 1, -2, 0, 0}; {4, -5, 4, -2, -2, 3, -2, 1, 4, 3, 0, 0}; {0, 0, 6, 9, 6, 10, 5, 9, 8, 1, 11, 9}; {0, 0, 6, 9, 11, 3, 11, 3, 0, 1, 9, 4}; {0, 0, 6, 10, 2, 1, 4, 0, 8, 8, 11, 8}; {-2, -3, 2, 6, 1, -5, -3, 3, 1, -2, 0, 0 1}; {6, 4, -3, 2, -2, 5, 5, -2, 0, 3, 0, 0}; {4,2,-5, 0, -3, 6, 0, 2, -4, 0, 0, 0}; {3, 0, 4, -2, 0, 6, 0, -3, -5, -3, 0, 0}; {0, 0, 7, 5, 0, 9, 2, 9, 3, 6, 4, 5}; {-3, 5, -4, 2, 2, -2, 2, -1, -4, -3, 0, 0}; {-2,-3, 3, 1, -4, -3, 4, -4, 2, -2, 0, 0}; {-1, 6, -4, 2, -5, 3, 0, -4, -3, -2, 0, 0}; {-3, 2, 2, 6, -1, -5, 3, 3, 0, 3, 0, 0}; {0, 0, 7, 6, 9, 3, 3, 1, 3, 5, 1, 5}; {-3, -5, 0, -2, 2, 4, -3, 2, 5, 2, 0, 0}; {1, -3, 0, -4, 1, -2, -4, 4, -5, -3, 0, 0}; {-3, 6, -2, -5, -4, 2, -2, 1, 4, 6, 0, 0}; {0, 0, 7, 8, 2, 1, 9, 4, 9, 7, 8, 10}; {0, 3, 1, 5, -2, 3, 4, -3, 5, 2, 0, 0}; {-2, 4, 5, 1, -2, 4, 4, -4, 1, -1, 0, 0}; {-5, 0, 0, -5, 4, -3, -5, -1, 3, 0, 0, 0}; {4,-1, 1, -2, 6, -3, -5, -1, -1, -5, 0, 0}; {-4, 0, -1, 6, 0, 1, -5, 3, 5, 1, 0, 0}; {0, 0, 7, 11, 5, 3, 6, 3, 0, 0, 4, 3}; {0, 0, -5, -1, 6, -4, 1, -3, 6, -1, 0, 0}; {0, 0, 7, 11, 10, 11, 4, 3, 7, 0, 8, 8}; {-4, 5, -2, 0, 6, -4, 5, 2, -3, 0, 0, 0}; {0, 4, 4, 2, 2, -3, -1, 4, -2, -5, 0, 0}; {0, 0, 8, 3, 3, 2, 4, 10, 2, 0, 8, 0}; {2, 1, -4, 2, 3, -3, 3, 6, 4, -2, 0, 0}; {4, 2, -4, 2, 5, 1, 6, 5, 5, 6, 0, 0}; {1, -3, 1, 6, 6, -3, 1, 0, -2, 3, 0, 0}; {2, -1, 4, -1, 6, 5, 1, 2, -4, -1, 0, 0}; {4, 2, -4, 4, 1, 5, -4, 4, 6, 0, 0, 0}; {1, -3, 1, -4, 0, -3, -3, 0, 6, 6, 0, 0}; {-3, 5, -3, 4, -2, -4, 6, 4, -5, -4, 0, 0}; {-2, -5, 0, -4, 6, 5, -4, -1, 5, -3, 0, 0}; {0, 0, 8, 8, 0, 10, 8, 2, 7, 2, 9, 0}; {3, -3, -1, 5, 5, 1, 5, 1, -3, -1, 0, 0}; {-4, -5, 2, 1, 6, -3, 3, -3, 1, -1, 0, 0}; {0, 0, 8, 8, 2, 8, 3, 10, 2, 0, 2, 4}; {6, -2, -2, 2, 3, -2, 3, -3, 3, 2, 0, 0}; {-5, 6, 1, 0, 2, -1, 4, -1, 2, -5, 0, 0}; {-2, 1, 0, 3, -3, -1, 5, -2, -5, 4, 0, 0}; {-3, 1, 1, 6, 3, -1, 4, 6, 3, 2, 0, 0}; {6, -1, 0, 6, 5, -4, 2, -3, 1, 0, 0, 0}; {-3, 3, 5, 0, -4, 1, -2, -4, -3, -4, 0, 0}; {-4, 0, 0, 6, 0, -5, -2, -4, -4, 5, 0, 0}; {0, 0, 8, 10, 0, 7, 2, 0, 4, 8, 6, 9}; {4, 1, 6, 5, -3, 5, -2, 2, 5, 2, 0, 0}; {0, 0, 8, 11, 9, 4, 11, 2, 6, 5, 5, 10}; {0, 0, 9, 0, 5, 10, 10, 10, 3, 11, 5, 3}; {-4, 6, 1, 2, -4, 4, -3, -1, 2, -1, 0, 0}; {-1, 5, -4, 6, 1, 6, 4, -4, -3, 3, 0, 0}; {0, 0, 9, 2, 3, 1, 9, 1, 10, 5, 6, 9}; {3, 3, 0, 5, -5, 4, -3, 2, 1, 6, 0, 0}; {-5, 2, 6, -5, -4, -2, 4, -3, 5, 3, 0, 0}; {0, 0, 9, 3, 10, 3, 4, 1, 4, 9, 10, 1}; {-5, 4, -2, 2, -3, -1, 3, 3, -1, -2, 0, 0}; {-2, -3, 5, -1, -2, 3, -4, 3, -5, 0, 0, 0}; {6, 5, 1, -5, -5, 0, 5, 1, 6, -1, 0, 0}; {5, 4, 0, -5, 3, -4, 2, 5, -4, 0, 0, 0}; {-1, 6, -2, 1, -3, -2, -5, 4, -5, -5, 0, 0}; {0, 0, 9, 5, 10, 0, 5, 1, 6, 6, 8, 4}; {3, -2, 2, 5, 5, 5, 6, 1, 6, 4, 0, 0}; {0, 0, 9, 5, 11, 11, 0, 4, 8, 3, 6, 7}; {-4, 3, -5, -1, -5, -4, 6, 4, -5, -5, 0, 0}; {3, -5, -4, -3, 3, -2, -5, 5, 0, 3, 0, 0}; {0, -5, -1, 4, 4, 0, 3, 1, -3, -3, 0, 0}; {0, 5, -5, -2, -1, -3, -4, 3, -3, 3, 0, 0}; {0, 0, 9, 8, 2, 5, 0, 6, 7, 11, 9, 2}; {-2, -2, -5, 6, 0, 5, -1, 4, -3, -3, 0, 0}; {2, -2, 3, -2, 4, 5, 2, 2, 5, 5, 0, 0}; {3, -3, 0, 6, 5, 1, 4, 1, -3, -2, 0, 0}; {2,-2, 3, -1, 6, 5, 1, 2, -4, -1, 0, 0}; {-5, -1, 0, 4, -2, 5, 2, 2, -2, 2, 0, 0}; {4, -5, -5, -1, 4, -1, 2, 0, -2, 5, 0, 0}; {1, 3, 2, 6, 0, -5, -1, -1, 5, 3, 0, 0}; {-5, 2, 6, 3, 4, 6, -1, 0, -3, 6, 0, 0}; {6, -3, -2, 3, -3, 4, -3, -2, 6, 2, 0, 0}; {-4, 0, 2, -3, 3, 0, 4, 6, 3, 1, 0, 0}; {0, 0, 10, 1, 8, 1, 4, 5, 10, 10, 4, 1}; {-4, 2, 6, 3, 4, 6, -1, 0, -3, 6, 0, 0}; {3, -2, 3, 2, -3, 2, 4, 5, -5, 1, 0, 0}; {0, 0, 10, 2, 3, 8, 9, 10, 6, 1, 7, 0}; {2, -4, 0, -2, 6, 6, 1, -4, -2, 0, 0, 0}; {-1, -1, -3, 1, -5, 4, 1, -1, 5, -3, 0, 0}; {1,-4, 1, 0, 2, -2, 2, 5, -5, 4, 0, 0}; {4, -1, 4, 4, -1, 0, -4, 5, -2, 0, 0, 0}; {4, 0, 6, -5, 4, -5, -1, 4, 3, -2, 0, 0}; {1, 6, -3, -4, 2, 6, 2, -1, -2, 2, 0, 0}; {3,-1, 5, -5, 6, -1, 2, 1, 0, 4, 0, 0}; {0, 5, -4, -4, 1, 6, 1, -2, -3, 2, 0, 0}; {0, 0, 10, 5, 5, 10, 3, 9, 10, 10, 2, 9}; {5, 3, -1, 4, 4, -1, 4, -5, 5, -2, 0, 0}; {3, 0, -5, 0, -5, -2, 1, 0, 3, 4, 0, 0}; {1, -1, -5, 2, -4, -3, -2, 4, -4, 0, 0, 0}; {0, 0, 10, 7, 3, 8, 3, 7, 6, 8, 11, 4}; {-3, 4, -3, 1, 5, 2, -1, 0, -2, -4, 0, 0}; {-3, 6, 1, -5, 1, 1, -1, 2, 5, -1, 0, 0}; {5, -3, -1, 1, -2, 5, 2, 3, 0, 4, 0, 0}; {-5, 4, -1, 6, -3, 6, 5, 3, -5, -2, 0, 0}; {1, 0, -3, -4, 1, 5, -2, 5, -2, -3, 0, 0}; {0, 0, 10, 11, 0, 2, 6, 10, 8, 3, 10, 3}; {-2, 4, -4, 3, -4, -5, -1, -1, 3, 3, 0, 0}; {-4, 2, -5, 2, -3, 6, 5, -2, 0, 2, 0, 0}; {-1, 6, 0, -4, -4, 2, 6, -4, -2, 1, 0, 0}; {0, 0, 11, 1, 3, 9, 8, 5, 1, 6, 0, 8}; {6, 1, -5, 4, 4, -1, 3, -5, -4, 0, 0, 0}; {-4, 2, -5, 3, 4, 6, 0, 0, -3, -5, 0, 0}; {0, 0, 11, 4, 1, 7, 8, 1, 3, 9, 0, 9}; {-1, 4, -4, -5, 1, 4, 2, -1, -3, 2, 0, 0}; {-1, 1, 2, -2, 2, -1, 3, -3, 6, 5, 0, 0}; {0, 0, 11, 6, 1, 0, 4, 7, 10, 5, 8, 4}; {-5, 2, -4, -2, 1, 3, -3, 5, 1, 1, 0, 0}; {-5, 3, -2, 1, -4, -1, 3, 3, -1, -2, 0, 0}; {-4, 4, -1, 3, -2, 1, 3, 2, 4, 5, 0, 0}; {3, -3, 2, 4, -3, 5, 3, 4, -1, -2, 0, 0}; {0, 0, 11, 7, 8, 4, 11, 10, 2, 2, 9, 2}; {5, 2, -2, 3, 1, 1, -4, -2, 5, -3, 0, 0}; {6, 3, -1, 5, -5, 3, 6, 5, 5, -2, 0, 0}; {1,-4,2, 6, -4, 3, 1, 0, -2, -3, 0, 0}; {-5, 4, 0, -5, -5, 5, -5, 2, 5, -2, 0, 0}; {2, -1, -5, 2, 6, 3, 2, 2, -5, -2, 0, 0}; {0, 0, 11, 9, 4, 9, 3, 9, 3, 4, 8, 8}; {5, 1, -4, 2, -4, -1, 1, 0, 3, 4, 0, 0}; {6, 0, 5, -3, 5, 5, 5, 3, -3, -4, 0, 0}; {-5, 1, 6, 0, -4, 5, 5, -3, 0, 1, 0, 0}; {2, -2, 5, 1, 2, -3, 1, 6, -4, -1, 0, 0}; and {1, -4, 2, -3, -1, -2, -3, 0, 5, 6, 0, 0}; and

{0, 0, 0, 0, 3, 6, 0, 10, 6, 3, 8, 1}; {0, 0, 1, 3, 3, 9, 6, 2, 4, 11, 2, 9}; {0, 0, 3, 0, 9, 4, 3, 3, 9, 1, 8, 0}; {0, 0, 3, 1, 10, 11, 8, 2, 6, 1, 2, 7}; {0, 0, 3, 1, 11, 6, 7, 1, 4, 11, 7, 11}; {0, 0, 3, 6, 10, 8, 8, 3, 11, 9, 0, 8}; {0, 0, 3, 7, 1, 4, 7, 6, 4, 0, 5, 2}; {0, 0, 4, 8, 8, 3, 9, 0, 7, 1, 10, 10}; {0, 0, 6, 5, 3, 5, 1, 5, 1, 8, 1, 2}; {0, 0, 6, 6, 1, 3, 4, 4, 5, 0, 6, 0}; {0, 0, 6, 8, 1, 3, 1, 4, 9, 5, 11, 8}; {0, 0, 7, 8, 8, 6, 2, 9, 6, 10, 3, 9}; {0, 0, 7, 8, 10, 9, 11, 2, 9, 1, 8, 4}; {0, 0, 8, 4, 4, 9, 3, 0, 5, 11, 2, 2}; {0, 0, 8, 5, 7, 10, 2, 10, 0, 11, 4, 11}; {0, 0, 8, 6, 9, 3, 11, 3, 4, 0, 4, 5}; {0, 0, 9, 1, 3, 9, 9, 9, 3, 0, 5, 0}; {0, 0, 10, 0, 7, 11, 7, 4, 11, 11, 2, 5}; {0, 0, 10, 11, 2, 7, 8, 2, 10, 2, 8, 4}; and {0, 0, 11, 6, 5, 0, 8, 1, 0, 4, 10, 1}; and

processing (S104) the first signal based on the N elements in the sequence $\{f_n\}$.

**4.** The signal processing method according to claim 3, wherein the receiving a first signal carried on N subcarriers comprises:

obtaining the first signal on the N subcarriers on N consecutive subcarriers; or
obtaining the first signal on the N subcarriers on N equally spaced subcarriers.

**5.** A sequence-based signal processing apparatus, comprising:

a processing unit, configured to determine a sequence $\{f_n\}$ comprising N elements, wherein $f_n$ is an element in the sequence $\{f_n\}$, the sequence $\{f_n\}$ is a sequence that meets a preset condition, the preset condition is $f_n = A \cdot x_n \cdot e^{2\pi j \cdot a \cdot n}$, a value of n ranges from 0 to N-1, A is a non-zero complex number, $a$ is a real number, $j = \sqrt{-1}$, for an element $x_n$, $x_n = u \cdot e^{2\pi j \cdot s_n / M}$, M=12, u is a non-zero complex number, and a set that consists of a first sequence $\{s_n\}$ consisting of an element $s_n$ comprises at least one of sequences in a first sequence set, wherein
the sequences in the first sequence set comprise some or all of the following sequences:

{-2, 4, -2, 4, 0, 2, 2, 0, 5, 5, 0, 0}; {-1, 6, 1, -4, -2, 4, -5, -5, 6, -5, 0, 0}; {3, -3, 3, -3, 0, -2, -2, 0, -5, -5, 0, 0}; {2, -4, 2, -4, -1, -2, -2, -1, -5, 6, 0, 0}; {-4, 2, -4, 3, -1, 1, 2, 1, 4, 5, 0, 0}; {0, 6, 0, -5, -2, -4, -3, -1, 6, 6, 0, 0}; {0, 6, 0, -5, -2, -3, -3, -1, 6, 6, 0, 0}; {-1, 5, -1, 6, -2, -3, -3, -1, 5, 5, 0, 0}; {-4, 2, -4, 4, -4, -5, -4, -2, 5, 5, 0, 01; {-5, 1, -5, 3, -5, 6, -5, -3, 5, 5, 0, 0}; {4, -2, 4, 0, -4, -1, 0, -1, 3, 4, 0, 0}; {0, 4, -4, 2, -3, -2, -3, 4, 1, -2, 0, 0}; {-1, 3, -5, 1, -4, -3, -3, 4, 1, -2, 0, 0}; {0, 5,

-2, 5, 2, 4, 3, 1, -3, -4, 0, 0}; {-3, 1, 5, -1, -5, -4, -5, 3, 0, -3, 0, 0}; {3, -3, 3, -1, 0, 6, -3, -3, -5, -4, 0, 0}; {1, 6, -1, 6, 6, 0, 2, 0, -3, -1, 0, 0}; {5,-2, 3, -2, 0, -1, 0, 0, -5, 6, 0, 0}; {-3, 3, -3, 5, -4, -4, -4, -2, 5, 5, 0, 0}; {-3, 0, 3, -3, 3, 1, 3, -5, 4, 1, 0, 0}; {-1, 4, -3, 5, 4, -2, 1, 0, -3, -2, 0, 0}; {3, -1, -5, -5, 1, -4, 0, 1, 4, -1, 0, 0}; {2,-2, 6, 6, 1, -5, 0, 1, 4, -1, 0, 0}; {0, -5, 2, 2, -5, 1, 4, 4, 6, 1, 0, 0}; {1, -3, 5, 6, 0, -5, -1, 1, 3, -1, 0, 0}; {-3, 4, -1, -1, 5, -1, 3, 4, 5, 0, 0, 0}; {-5, 1, -5, 6, -1, 4, -5, -5, -5, 1, 0, 0}; {-2, 5, 0, 0, 6, 0, 3, 4, 5, 0, 0, 0}; {-5, 1, -5, 6, -1, 5, -5, 6, -5, 1, 0, 0}; {3, -3, 3, 3, -4, 2, 5, 5, 6, 0, 0, 0}; {-3, 3, -3, -3, 4, -2, -5, -5, 6, 0, 0, 0}; {4, -3, 2, 2, -4, 1, -2, -3, -5, 0, 0, 0}; {5,-1, 5, 6, 1, -5, 5, 6, 5, -1, 0, 0}; {5,-1, 5, 6, 1, -4, 5, 5, 5, -1, 0, 0}; {3, -4, 1, 1, -5, 1, -3, -4, -5, 0, 0, 0}; {-1, 3, -5, 6, 0, 5, 1, -1, -3, 1, 0, 0}; {0, 5, -2, -2, 5, -1, -4, -4, 6, -1, 0, 0}; {-2, 2, 6, 6, -1, 5, 0, -1, -4, 1, 0, 0}; {-2, 2, 6, 6, 0, 5, 1, -1, -3, 1, 0, 0}; {-3, 1, 5, 5, -1, 4, 0, -2, -4, 1, 0, 0}; {-3, 1, 5, 5, -1, 4, 0, -1, -4, 1, 0, 0}; {-2, 3, -4, -3, 4, -2, -5, -5, 6, -1, 0, 0}; {3, 0, -3, 3, -3, -1, -3, 5, -4, -1, 0, 0}; {4,-2, 4, -4, 4, 5, 4, 2, -5, -5, 0, 0}; {-5, 2, -3, 2, 0, 1, 0, 0, 5, 6, 0, 0}; {-1, 5, -1, 3, 5, 1, 1, 6, 5, -1, 0, 0}; {0, -5, 2, -5, -2, -4, -3, -1, 3, 4, 0, 0}; {4, -2, 4, -3, 6, 6, 4, 3, -5, -5, 0, 0}; {2, -4, 2, -5, 4, 5, 3, 2, -5, -5, 0, 0}; {-3, 3, -3, 2, 0, -5, 4, 3, -1, 0, 0, 0}; {0, 6, 0, 5, 3, 4, 3, 1, 6, 6, 0, 0}; {6, 0, 6, -1, 2, 0, -1, 0, -4, -5, 0, 0}; {-4, 4, 1, -4, -4, 0, 4, 0, 3, -1, 0, 0}; {-1, 5, 0, 5, 3, 3, 2, 1, 6, -5, 0, 0}; {-3, 2, -4, 0, -2, -4, -5, 4, -4, -4, 0, 0}; {-1, 6, 2, -4, -2, -3, 4, -5, -1, 2, 0, 0}; {5, -2, 4, -3, 5, 6, 5, 3, -5, -5, 0, 0}; {-1, 5, 0, 6, -3, -4, -4, -2, 6, 6, 0, 0}; {-5, 1, -4, 3, -5, 6, -5, -3, 5, 5, 0, 0}; {5, -3, 2, -5, -3, 6, 3, -4, 6, 0, 0, 0}; {3, -5, 0, 5, -4, 5, 2, -5, 5, 0, 0, 0}; {0, 5, -1, 5, 5, -2, -2, 2, 2, 2, 0, 0}; {-5, 0, 6, 0, 2, 0, 0, 1, -4, -5, 0, 0}; {-4, 1, -5, 3, -5, 6, -4, -3, 5, 5, 0, 0}; {-3, 1, 6, 1, -5, -4, -4, 3, 1, -2, 0, 0}; {6,-3, 1, -5, 1, 0, 1, 6, 3, 0, 0, 0}; {-5, -1, 4, 0, 3, -3, -4, 2, 0, -2, 0, 0}; {5, 0, -4, -4, 2, -3, 1, 2, 4, -1, 0, 0}; {3,-2, 6, 6, 1, -4, 0, 1, 4, -1, 0, 0}; {-1, 5, 0, 0, 5, 0, 4, 4, 5, 0, 0, 0}; {5, -1, 6, 6, -1, -2, 4, 6, 2, 0, 0, 0}; {-1, 5, 0, 0, 6, 0, 3, 4, 5, 0, 0, 0}; {-1, 4, -2, -2, 4, -1, -4, -4, 6, -1, 0, 0}; {-5, -1, 4, 3, -3, 3, -1, -2, -4, 0, 0, 0}; {-3, 1, 6, 5, -1, 4, 0, -2, -3, 1, 0, 0}; {-2, 3, -3, -3, 4, -2, -5, -5, 6, -1, 0, 0}; {-5, -1, 4, 3, -2, 3, -1, -2, -4, 0, 0, 0}; {-4, 1, -5, -5, 3, -3, 6, 6, 6, -1, 0, 0}; {6, -2, 3, 2, -3, 2, -1, -3, -4, 0, 0, 0}; {3, 6, -2, -3, 3, -5, 3, 1, -2, 2, 0, 0}; {-5, -1, 4, 4, -3, 3, -1, -2, -4, 1, 0, 0}; {6,-2, 3, 3, -3, 3, -1, -2, -4, 0, 0, 0}; {5, -3, 2, 2, -4, 2, -2, -3, -5, 0, 0, 0}; {5, 1, -2, 4, -2, 0, -3, 6, -4, -1, 0, 0}; {3, -2, 6, -1, 4, 5, 1, -2, -2, 0, 0, 0}; {5,

-1, -5, -1, 1, 3, -3, 3, 3, 1, 0, 0}; {4, 1, 0, -5, 1, 6, 2, 2, 5, -3, 0, 0}; {3, -1, -3, 3, -3, -1, 6, -4, -5, -1, 0, 0}; {1,-3,-5, 1, -5, -2, 6, -5, 6, -3, 0, 0}; {2, -5, 2, -5, 4, 5, 3, 2, -5, -5, 0, 0}; {-1, 3, -3, 1, 0, 4, 1, -5, 6, 2, 0, 0}; {-2, 2, -4, 0, -1, 3, 1, 6, 5, 3, 0, 0}; {5, -1, -5, 2, -5, -1, 3, 5, 4, 4, 0, 0}; {5, -1, -5, 2, -5, -1, 3, 6, 5, 4, 0, 0}; {0, 4, -2, 3, 6, 4, 0, 6, 4, 0, 0, 0}; {-3, 3, -1, 6, -5, -2, -4, -2, 3, 3, 0, 0}; {-4, -1, 4, -3, -1, -5, 3, -4, 5, 0, 0, 0}; {-5, -2, 3, -4, -2, -5, 4, -4, 6, 0, 0, 0}; {0, 4, -2, 4, -2, -3, -1, -1, 4, 3, 0, 0}; {6, -3, 2, -5, 4, -5, -5, -3, 6, 3, 0, 0}; {6, -2, 4, -2, -4, 1, 0, 4, 4, 2, 0, 0}; {6, -2, 4, -2, -3, 2, 1, 5, 4, 2, 0, 0}; {4, -3, 4, 0, 0, 6, -5, -1, 1, -1, 0, 0}; {-1, 2, -5, 1, 0, 4, 3, 6, 5, 3, 0, 0}; {3, 5, -3, 2, 3, -1, 6, -1, -5, 1, 0, 0}; {-2, 1, 6, 0, -5, -4, -2, -2, 4, 2, 0, 0}; {-3, 2, -3, 6, -3, 3, 4, -1, -2, -3, 0, 0}; {1,3,-5, 1, 2, -3, 4, -3, 5, 0, 0, 0}; {0, 2, 6, 0, 1, -3, 4, -3, 5, 0, 0, 0}; {-3, -1, 3, -2, 6, -2, -5, -3, -5, 5, 0, 0}; {0, 3, -4, -5, 1, 6, 1, 0, -3, 1, 0, 0}; {-4, 3, 0, 4, -4, -3, 4, 0, 0, -1, 0, 0}; {-4, 4, 2, -5, 0, 3, -2, -5, -2, 0, 0, 0}; {-5, 3, 1, 6, -1, 2, -2, -5, -2, 0, 0, 0}; {5, 1, 0, 5, -2, 2, -3, 6, -2, 0, 0, 0}; {-4, 4, 3, -3, 3, -5, 4, 5, 5, -4, 0, 0}; {4, -1, -3, 3, -3, -1, -5, -4, 6, -2, 0, 0}; {-1, 5, 2, -4, -4, 1, 5, -1, 1, 0, 0, 0}; {-3, 3, 0, 6, -5, -1, -5, -2, 3, 2, 0, 0}; {2, 6, 1, 6, 6, -1, -2, 4, 3, 1, 0, 0}; {-1, 2, -4, 0, 0, 4, 2, -5, 5, 2, 0, 0}; {-2, 4, 1, -4, 3, -5, -1, 4, 4, 3, 0, 0}; {-5, -1, 6, -1, -3, 1, 2, -5, 4, 2, 0, 0}; f 4, -4, 3, -4, -5, 0, -1, 4, 4, 1, 0, 0}; {4, -4, 3, -4, -5, 0, -1, 4, 4, 2, 0, 0}; {2, 5, -1, 3, 1, 5, 3, -4, 6, 3, 0, 0}; {1, 4, -2, 3, 1, 5, 3, -5, 6, 3, 0, 0}; {3, -4, 4, -1, -1, 5, 6, -1, 1, -1, 0, 0}; {-2, 1, -5, 0, -1, 3, 2, 6, 5, 3, 0, 0}; {-2, 4, 1, -3, 3, -5, 0, 3, 3, 3, 0, 0}; {6,-2, 5, -1, 5, 5, -4, -4, 5, 5, 0, 0}; {5, -3, 4, -2, 5, 5, -5, -4, 5, 5, 0, 0}; {5,-2, 6, 1, 0, 6, -5, 0, 2, 0, 0, 0}; {1, 4, -2, 3, 0, 4, 4, -4, 6, 3, 0, 0}; {0, 2, -5, 0, 1, -3, 4, -3, 5, 0, 0, 0}; {-2, 0, 5, -2, 0, -4, 4, -3, 6, 0, 0, 0}; {5, -5, 0, 6, 3, -5, 5, -4, 6, 5, 0, 0}; {-5, -2, 4, -1, 5, -4, -5, 3, 0, -2, 0, 0}; {-3, -1, 4, 2, 4, -1, 6, 1, 0, 4, 0, 0}; {5,-5, 1, -1, 2, -3, 4, -1, -1, 3, 0, 0}; {-2, -5, -4, 2, -3, 2, 0, 2, 3, -5, 0, 0}; {0, -5, 6, -1, 3, 6, 1, -3, -1, -1, 0, 0}; {5, 0, -1, 5, 5, -3, 3, -2, 1, 0, 0, 0}; {1, -4, -5, 1, 3, -5, 1, -3, 0, -1, 0, 0}; {-5, 2, 1, -5, -2, 3, -3, 6, -2, 0, 0, 0}; {0, 6, 4, -2, -4, 1, 5, -1, 1, 1, 0, 0}; {-1, 4, 1, -5, -3, 3, 4, -1, 0, -2, 0, 0}; {-2, 4, 2, -3, 1, 5, 4, 5, -1, 2, 0, 0}; {-3, -1, 5, -2, -1, -5, 3, -4, 5, -1, 0, 0}; {-5, -3, 3, -4, -2, 6, 1, -5, 4, -1, 0, 0}; {6, -5, 0, 4, 5, 0, -5, -1, -5, 1, 0, 0}; {0, 4, 0, -5, -1, 4, 5, 1, -1, -3, 0, 0}; {2, -3, -3, 3, 5, 1, -4, 1, -2, -1, 0, 0}; {-3, -3, 2, -4, -3, 5, -1, 3, 0, 0, 0, 0}; {-4, 2, 1, -5, -4, 4, -2, 2, 0, 0, 0, 0}; {-3, -1, 6, -4, 6, -2, 5, -1, -4, 5, 0, 0}; {1, -4, -4, 3, 2, 6, 0, -3, 0, -1, 0, 0}; {-1,

5, 4, -2, -4, 0, 5, 0, 2, 1, 0, 0}; {0, -5, -5, 2, 1, 6, 0, -4, -1, -1, 0, 0}; {-1, 6, 6, 1, 1, 6, 0, -4, -1, -1, 0, 0}; {-4, 2, 1, -5, 6, -1, 3, -2, 1, 0, 0, 0}; {-3, 4, 4, -1, -1, 5, -2, 6, -2, -2, 0, 0}; {-4, 3, 3, -2, -2, 4, -2, 6, -2, -1, 0, 0}; {-4, 3, 3, -2, -1, 4, -2, -5, -1, -1, 0, 0}; {-5, 1, 0, 6, 6, -2, 4, -1, 1, 0, 0, 0 1; {-4, 3, 3, -2, -1, 4, -1, -5, -1, -1, 0, 0}; {3, 5, 0, 3, -4, 4, 2, -5, 5, -1, 0, 0}; {-3, 3, 2, -3, 6, -3, 3, 0, 1, -1, 0, 0}; {1, 4, 0, -5, -1, 4, 5, 1, -1, -4, 0, 0}; {-3, -2, 4, -2, -1, -5, 2, -5, 4, -1, 0, 0}; {-4, 2, 2, -5, -3, 4, -2, 3, 0, 0, 0, 0}; {5, -3, -5, -1, -3, 4, -4, -3, 5, 4, 0, 0}; {-5, 3, 5, 1, 3, -4, 4, 3, -5, -4, 0, 0}; {6, 0, 0, 6, -5, 3, -2, 2, -1, 0, 0, 0}; {6, 0, 0, 6, -5, 3, -2, 3, -1, 0, 0, 0}; {-4, 2, 2, -4, 6, -2, 4, -1, 1, 1, 0, 0}; {-5, 1, 1, -5, 5, -3, 3, -2, 1, 1, 0, 0}; {6, 0, 0, 6, 5, -3, 2, -2, 1, 0, 0, 0}; {6, 0, 0, 6, 5, -3, 3, -2, 1, 0, 0, 0}; {4, -2, -2, 5, 3, -4, 2, -3, 0, 0, 0, 0}; {6, 3, -5, 2, -4, 6, 5, 3, 6, -5, 0, 0}; {-3, -5, 0, -3, 4, -4, -2, 5, -5, 1, 0, 0}; {-4, 3, 5, -1, -5, 2, 6, -5, 0, 0, 0, 0}; {4, -2, -1, 5, 4, -4, 2, -2, 0, 0, 0, 0}; {-1, 4, 4, -3, -2, 6, 0, 3, 0, 1, 0, 0}; {0, -5, -3, 4, -4, 5, 1, -5, -5, -2, 0, 0}; {5, -2, -2, 3, 0, 4, -4, 3, 1, 2, 0, 0}; {0, 6, -5, 2, 0, 5, 0, -4, -1, 0, 0, 0}; {-2, 3, 3, -3, -5, -1, 4, -1, 2, 1, 0, 0}; {3, -4, -4, 2, -2, 1, -5, 3, 1, 1, 0, 0}; {2, -4, -3, 4, 1, 6, 1, -3, -1, 0, 0, 0}; {0, 4, 3, -4, 3, 6, -1, 6, 4, 2, 0, 0}; {-5, 5, -1, 1, -2, 3, -4, 1, 1, -3, 0, 0}; {-1, -3, 3, -4, 6, 3, -2, 0, -5, -1, 0, 0}; {-4, 4, -4, 1, -5, -4, 6, 4, -5, -5, 0, 0}; {6, 5, 0, -4, -5, 0, 5, 1, 5, -1, 0, 0}; {5, 3, -3, 4, 2, 6, -1, 5, -4, 1, 0, 0}; {3, 1, -5, 2, 1, 5, -3, 4, -5, 1, 0, 0}; {4, -1, 2, -5, 0, -1, -3, -5, -4, -3, 0, 0}; {3, -2, 1, -5, 1, -2, -4, 6, -5, -3, 0, 0}; {-4, 1, 2, -5, -4, 4, -2, 5, 0, 1, 0, 0}; {2, -4, -2, 4, 0, 5, -3, -3, 1, -1, 0, 0}; {5, -2, -1, 5, 2, -3, 3, 6, 2, 0, 0, 0}; {2, 5, 4, -2, 3, -2, 0, -2, -3, 5, 0, 0}; {-5, -1, 0, -5, 2, -2, 3, 6, 2, 0, 0, 0}; {3, 1, -4, -2, -4, 1, 6, -1, 0, -4, 0, 0}; {2, -1, 5, -2, -5, 5, 0, 1, -4, -1, 0, 0}; {2, 0, -5, 2, 0, 4, -4, 3, 6, 0, 0, 0}; {0, -2, 5, 0, -1, 3, -4, 3, -5, 0, 0, 0}; {4, -1, 3, -4, 2, -1, -4, 6, -5, -4, 0, 0}; {2, -4, -1, 3, -3, 5, 0, -3, -3, -3, 0, 0}; {4, -2, 1, 6, 0, -1, -3, -5, -4, -3, 0, 0}; {-1, 5, -4, 1, -5, 3, -1, -4, -4, -3, 0, 0}; {-2, 4, -5, 0, 6, 2, -1, -4, -4, -3, 0, 0}; {3, -3, 0, 6, 5, 1, 5, 2, -3, -2, 0, 0}; {5, 2, -4, 5, 1, 5, -4, 4, 6, 0, 0, 0}; {3, 3, 0, 1, -5, 0, 6, 2, -4, -4, 0, 0}; {4, -4, -3, 3, -3, 5, -4, -5, -5, 4, 0, 0}; {-1, 3, 5, -1, 5, 2, 6, 5, 6, 3, 0, 0}; {-3, 1, 3, -3, 3, 1, 6, 4, 5, 1, 0, 0}; {-4, -1, 0, 5, -1, 6, -2, -2, -5, 3, 0, 0}; {-5, -1, 1, -4, 2, -1, 3, 6, 4, 1, 0, 0}; {5, -3, -1, 6, 1, -2, 2, 5, 2, 0, 0, 0}; {4, -4, -2, 5, 0, -3, 2, 5, 2, 0, 0, 0}; {4, -3, 0, -4, 4, 3, -4, 0, 0, 1, 0, 0}; {4, -2, 2, -1, -1, 6, -1, -3, -5, -4, 0, 0}; {0, -3, 4, 5, -1, 6, -1, 0, 3, -1, 0, 0}; {0, -2, 6, 0, -1, 3, -4, 3, -5, 0, 0, 0}; {-1, -3, 5, -1, -2, 3,

-4, 3, -5, 0, 0, 0}; {-5, 2, -5, -1, 6, -5, 6, 4, -5, -5, 0, 0}; {-5, 3, -3, 2, -2, 0, 1, 0, 4, 5, 0, 0}; {-3, -5, 3, -2, -3, 1, 6, 1, 5, -1, 0, 0}; {-3, 5, -1, 5, -1, 1, 2, 1, 4, 5, 0, 0}; {-4, 4, -2, 4, -2, 1, 2, 1, 4, 5, 0, 0}; {-5, 3, -3, 3, -2, 0, 1, 0, 4, 5, 0, 0}; {4, -1, 4, -3, 4, 5, 5, 3, 6, 6, 0, 0}; {1, -4, 1, 6, 1, 2, 6, 5, 1, -1, 0, 0}; {2, -3, 2, -5, 3, 4, 4, 2, 6, 6, 0, 0}; {5, 2, -3, 4, 2, 5, -4, 4, 6, 0, 0, 0}; {4, 1, -4, 3, 1, 5, -3, 4, -5, 0, 0, 0}; {-5, 3, -3, 5, 3, -5, -3, 4, 6, 0, 0, 0}; {-2, 6, 0, -4, 4, -5, -2, 5, -5, 0, 0, 0}; {3, -2, 3, -1, 0, 6, -2, -3, -5, -4, 0, 0}; {0, -5, 0, -4, 1, 3, 2, 1, 5, 5, 0, 0}; {-1, 6, 0, -4, 3, 2, 2, -4, -1, 2, 0, 0}; {6, 1, -5, 3, -5, 6, -5, -2, 3, 4, 0, 0}; {-1, 5, -2, 6, -1, 2, 2, 0, 4, 4, 0, 0}; {-3, 2, 6, 1, -4, -5, -1, 2, 2, 0, 0, 0}; {-5, -1, 2, -4, 2, 0, 3, 6, 4, 1, 0, 0}; {5, -1, 4, 1, -2, -3, 3, -4, -2, -1, 0, 0}; {0, -4, 3, 3, -4, -4, 0, 4, 0, 1, 0, 0}; {-5, 3, -2, -2, 4, -2, 2, 3, 5, 0, 0, 0}; {6, 2, -3, -3, 3, -3, 1, 2, 4, 0, 0, 0}; {5, 1, -4, -4, 3, -3, 1, 2, 4, -1, 0, 0}; {6, 2, -3, -2, 3, -2, 1, 3, 4, 0, 0, 0}; {4, -1, 5, 5, -3, 3, 6, 6, 6, 1, 0, 0}; {5, 1, -4, -3, 2, -3, 1, 2, 4, 0, 0, 0}; {5, 1, -4, -3, 3, -3, 1, 2, 4, 0, 0, 0}; {2, -3, 3, 3, -4, 2, 5, 5, 6, 1, 0, 0}; {1, -4, 2, 2, -4, 1, 4, 4, 6, 1, 0, 0}; {1, -5, 0, 0, 6, 0, -3, -4, -5, 0, 0, 0}; {-5, 1, 6, 6, 1, 2, -4, 6, -2, 0, 0, 0}; {1, -5, 0, 0, -5, 0, -4, -4, -5, 0, 0, 0}; {-3, 2, 6, 6, -1, 4, 0, -1, -4, 1, 0, 0}; {-5, 0, 4, 4, -2, 3, -1, -2, -4, 0, 0, 0}; {6, -1, 3, 3, -2, 3, -1, -3, -4, 1, 0, 0}; {-1, -3, 6, 0, 3, -1, 2, 3, 3, -4, 0, 0}; {6, 3, -1, 5, -1, 0, -1, 6, -3, 0, 0, 0}; {6, 2, -3, 2, -4, -1, 3, 4, -1, -1, 0, 0}; {3, -2, 4, -4, 3, 4, 5, 3, 6, 6, 0, 0}; {4, -1, 5, -3, 5, 6, 4, 3, -5, -5, 0, 0}; {1, -4, 2, 6, 2, 3, 4, 2, 6, 6, 0, 0}; {1, -4, 2, -5, 3, 4, 3, 2, 6, 6, 0, 0}; {-2, 5, -1, 4, 1, 2, 2, 1, 5, 6, 0, 0}; {5, -1, 4, -3, 5, 6, 5, 3, -5, -5, 0, 0}; {-5, 3, -2, 5, 3, 6, -3, 4, 6, 0, 0, 0}; {-3, 4, -2, 4, -1, 1, 2, 1, 4, 5, 0, 0}; {-5, 2, -4, 2, -2, 0, 1, 0, 4, 5, 0, 0}; {-3, 5, 0, -5, 4, -5, -2, 5, -5, 0, 0, 0}; {6, 0, 5, -1, -5, -5, 5, 4, -4, -4, 0, 0}; {2, -4, 1, -5, 3, 4, 4, 2, 6, 6, 0, 0}; {2, -4, 1, -5, 4, 4, 4, 2, 6, -5, 0, 0}; {-1, 6, 0, -5, -2, -4, -3, -1, 5, 5, 0, 0}; {-1, 6, 0, -5, -2, -3, -3, -1, 5, 5, 0, 0}; {-4, 3, -3, 4, -4, -5, -4, -2, 5, 5, 0, 0}; {-5, 2, -4, 3, -5, 6, -5, -3, 5, 5, 0, 0}; {-5, 2, -4, 3, -4, -5, -5, -1, 2, 4, 0, 0}; and {-2, 5, -1, 6, -1, 2, 3, 1, 4, 5, 0, 0};

{-3, 2, -5, 0, -1, -3, -5, 5, -3, -4, 0, 0}; {6, 0, 6, 0, 4, -5, -4, 2, 0, -2, 0, 0}; {0, 0, 0, 1, 10, 8, 5, 0, 4, 9, 10, 2}; {1, -5, 1, -3, -5, -1, -1, 6, -5, 1, 0, 0}; {-4, 1, 6, 1, -2, 6, 0, 2, 4, 3, 0, 0}; {-3, 1, 5, 0, -5, -3, -4, 3, 0, -2, 0, 0}; {4, 5, 6, -2, 3, -1, 4, -1, -2, 4, 0, 0}; {-4, -1, 2, -4, 6, -2, -4, -5, -4, 3, 0, 0}; {-2, 3, -4, 4, 5, 6, 1, 1, -3, -5, 0, 0}; {0, 0, 0, 4, 8, 11, 9, 6, 10, 5, 0, 11}; {2, -4, 2, 1, 6, 4, -5, -1, 3, 1, 0, 0}; {5, 3, 1, 5, 1, 3, -2, 5, 6, -3, 0, 0}; {4, 6, -4, 4,

-3, 6, 0, 6, 6, 3, 0, 0}; {-4, 0, 4, 3, -2, 3, -1, -2, -5, 0, 0, 0}; {-5, -5, -5, 2, 6, -2, 6, 4, -3, 6, 0, 0}; {-2, -4, 6, 0, 5, -3, -5, 3, -4, -1, 0, 0}; {1, -2, -5, 0, 5, 0, 3, 2, 4, 6, 0, 0}; {2, -3, 4, -4, -5, 6, -1, -1, 3, 5, 0, 0}; {4, 0, -4, 2, 1, 4, -4, 3, 5, 0, 0, 0}; {3,-2, 5, -2, 0, -2, -3, 3, 3, -2, 0, 0}; {5, -1, 5, -2, 0, 0, -1, 0, -4, 6, 0, 0}; {6, 1, -3, 3, -4, 0, 4, 6, 6, 5, 0, 0}; {6, 0, -5, 1, 0, 2, 0, 0, 5, 5, 0, 0}; {-1, 6, 2, -2, 3, -4, 0, 3, 3, 3, 0, 0}; {-1, 5, 0, -5, 3, 2, 2, -5, -2, 1, 0, 0}; {1, 6, 0, -5, 4, -2, 0, 3, 3, 3, 0, 0}; {0, 0, 1, 3, 11, 7, 11, 4, 5, 0, 0, 7}; {6, -3, 1, -5, -2, -5, 3, -4, 6, 1, 0, 0}; {0, 2, 5, -2, 5, 3, 3, -3, 4, 0, 0, 0}; {-4, 1, -5, 4, -4, -5, -4, -2, 5, 4, 0, 0}; {2, 4, -5, 1, 5, 0, -5, 5, 3, -1, 0, 0}; {0, 0, 1, 5, 9, 2, 10, 3, 0, 8, 4, 4}; {-2, -1, 1, -5, 3, 6, 2, 0, -1, 6, 0, 0}; {0, 0, 1, 6, 3, -1, 4, 6, 1, 5, 0, 0}; {-5, 1, -4, -5, -1, 5, -5, -5, -4, 2, 0, 0}; {1, -5, 2, 1, 5, 0, 1, -3, -5, -4, 0, 0}; {-4, 0, 5, 2, -3, -4, 4, -2, 1, 1, 0, 0}; {0, 0, 1, 6, 11, 3, 10, 7, 4, 11, 2, 1}; {5, -1, 6, 6, 5, 2, -5, 4, 6, -4, 0, 0}; {-2, -5, 5, -4, 4, 6, 1, 6, -4, -4, 0, 0}; {-4, 3, -1, 0, 6, 6, -1, 3, -1, -1, 0, 0}; {0, 0, 1, 9, 0, 1, 6, 1, 8, 8, 5, 0}; {0, 0, 1, 9, 2, 5, 4, 8, 5, 1, 0, 6}; {-1, -5, 4, -4, 3, 5, 0, 6, -5, -1, 0, 0}; {0, 0, 1, 10, 1, 8, 11, 3, 2, 8, 7, 2}; {2, -4, 3, -5, -5, 5, -2, 0, 4, 4, 0, 0}; {2, -4, 3, -5, -5, 5, -1, 0, 3, 4, 0, 0}; {0, 0, 2, 0, 8, 9, 6, 10, 3, 9, 9, 2}; {-3, 1, -5, -2, -2, 3, -1, 6, 5, 1, 0, 0}; {3, -4, 3, -4, 5, 5, 2, 2, -4, -3, 0, 0}; {-1, 0, 3, 4, -1, -5, 2, -5, 2, 3, 0, 0}; {-5, 0, -5, 1, 3, -4, -4, 2, 1, 0, 0, 0}; {4, -5, 0, 4, 2, 6, 3, -4, 6, 4, 0, 0}; {0, 4, -2, 4, -3, -4, -1, -2, 6, 5, 0, 0}; {5,-4, 1, 6, 1, -1, 1, 0, 6, 3, 0, 0}; {-1, 6, 3, 1, 6, -1, -2, 0, -5, -1, 0, 0}; {3, 6, -1, 5, 0, -2, 0, -2, -4, -5, 0, 0}; {3,-3, 5, 2, 2, -3, 1, -5, -3, -1, 0, 0}; {4,-5, 0, -5, -4, 0, 2, 1, 5, 1, 0, 0}; {-3, 0, 5, 0, -5, -3, -5, 3, 0, -2, 0, 0}; {0, 0, 2, 7, 6, 4, 11, 8, 5, 9, 4, 7}; {-3, 0, 5, 2, -5, 3, -1, -2, 2, 2, 0, 0}; {-1, -1, 1, -4, 6, -3, 3, -2, -1, 5, 0, 0}; {3, 6, -1, -2, 3, -5, 3, 1, -2, 2, 0, 0}; {3, -1, -3, 1, 2, 5, 3, -5, 1, 4, 0, 0}; {0, 0, 2, 10, 4, 0, 11, 9, 6, 0, 3, 5}; {4, -2, 6, -3, -4, 6, 1, 0, 3, 6, 0, 0}; {-1, 0, 3, 1, 0, -5, -2, 5, 1, 6, 0, 0}; {0, 0, 2, 11, 10, 4, 6, 9, 3, 8, 2, 9}; {0, 0, 2, 11, 11, 5, 6, 2, 5, 10, 6, 1}; {-5, -2, 4, 4, -2, 3, 0, -2, -4, 0, 0, 0}; {6, 6, -3, -5, 3, -2, 2, -4, 3, 5, 0, 0}; {0, -4, -5, 1, -5, -2, 5, -4, -5, -1, 0, 0}; {-4, 4, 3, -2, 1, 5, -1, -4, -1, -2, 0, 0}; {2, -5, 3, -4, 3, 3, 6, -5, 4, 5, 0, 0}; {0, 0, 3, 3, 7, 1, 5, 3, 1, 11, 7, 11}; {0, 0, 3, 3, 11, 8, 5, 7, 3, 6, 11, 4}; {1, 6, 2, -4, -2, 0, -2, -1, 4, 3, 0, 0}; {0, 0, 3, 4, 11, 1, 7, 10, 5, 11, 6, 3}; {2, -2, -3, -5, 0, 5, -4, -4, 1, -3, 0, 0}; {-3, 5, 4, 3, -3, 2, 5, -5, 0, -3, 0, 0}; {0, 0, 3, 6, 5, 2, 7, 4, 3, 1, 7, 0}; {-3, 1, -4, 3, 6, -2, -3, 5, 1, -1, 0, 0}; {-1, 2, -4, 2, -4, 6, 1, 2, -2, -2, 0, 0}; {-1, 2, -4, 2, -4, -4, -1, -2, 4, 2, 0, 0}; f 0, 0, 3, 8, 2, 2, 9, 7, 6, 2, 6, 3}; {0, 0, 3, 8, 10, 7, 4, 3, 8, 4, 8, 6}; {3, 2, 4, -3, 6, -1, 5, 0, 1, 5, 0, 0}; {2, 1, 3, -4, 5, -2, 5, 0, 1, 5, 0, 0}; {-5, 3, 2, 5, 3, 0, 4, -3, 5, -4, 0, 0}; {-3, 0, 6, 5, 0, 2, -4, 4, -1, -1, 0, 0}; {0, 0, 4, 0, 6, 1, 9, 7, 6, 2, 5, 8}; {-2, 1, -4, -4, 4, -4, 3, -1, -4, -2, 0, 0}; {0, 0, 4, 1, 8, 3, 5, 3, 2, 9, 11, 4}; {5, 1, 1, 6, -1, 2, -2, -5, -3, -3, 0, 0}; {-5, 4, 5, -1, 6, -5, 1, 5, 5, -2, 0, 0}; {6, 3, 4, 0, 6, 4, -2, 4, 6, -2, 0, 0}; {-5, 6, -3, -5, 3, -1, 2, -2, 3, 6, 0, 0}; {-2, 2, -2, 1, 5, -2, -2, 6, 4, -1, 0, 0}; {-5, -1, -5, -2, 4, -1, -4, 4, 5, 6, 0, 0}; {6, 6, -2, -3, 4, -2, 5, -3, 3, 3, 0, 0}; {3, 3, -5, -5, 1, -3, 3, -4, 2, 3, 0, 0}; {1, 4, -1, 4, -3, -3, 0, -2, 6, 2, 0, 0}; {6, 1, 0, -2, 3, -5, -2, -3, 2, -2, 0, 0}; {3, -5, 3, -1, -5, 6, 2, 5, -2, 0, 0, 0}; {0, 1, 6, -1, 6, 3, 4, -1, -2, 2, 0, 0}; {0, 0, 4, 8, 6, 2, 2, 11, 3, 4, 0, 5}; {-1, 6, 5, 4, -2, 1, -2, 0, 1, -4, 0, 0}; {6, -4, 2, -4, -1, 4, 1, -5, 3, 0, 0, 0}; {0, 4, 0, -4, 2, -2, -2, 6, -4, 0, 0, 0}; {0, 0, 4, 8, 10, 3, 11, 4, 2, 2, 11, 6}; {-3, 1, -3, 6, -4, 6, 5, -1, -5, -4, 0, 0}; {1, 3, -3, 4, 6, -3, 2, 0, 5, 1, 0, 0}; {0, 0, 4, 10, 2, 4, 7, 6, 10, 7, 5, 3}; {1, 4, -1, -3, -1, -4, 5, -2, -2, -5, 0, 0}; {0, 0, 4, 11, 11, 0, 11, 9, 3, 5, 2, 8}; {5, 1, 2, 6, 0, 2, -2, 6, -3, -4, 0, 0}; {3, -3, -4, -1, 3, -2, -5, -5, -1, 4, 0, 0}; {0, 0, 5, 2, 1, 2, 1, 9, 6, 10, 3, 8}; {0, 0, 5, 2, 1, 5, 2, 5, 0, 10, 0, 7}; {2, -4, -5, -1, 2, -4, -4, 4, -1, 1, 0, 0}; {5, 2, 4, -1, 5, 6, 1, 5, 5, -3, 0, 0}; {5, 0, 0, 5, -4, 3, 5, 1, -3, 0, 0, 0}; {0, -3, -1, -5, 2, -3, -4, 3, -5, -2, 0, 0}; {0, -4, -3, 4, -2, -5, 1, 6, -5, -1, 0, 0}; {-3, -5, -2, -4, 4, -4, 1, 6, -4, 6, 0, 0}; {3, 6, 2, 5, -5, 2, -2, 5, 5, 5, 0, 0}; {2, -4, -5, 1, 1, -5, 2, 6, 1, 1, 0, 0}; {-4, 2, 1, -4, -2, 3, -3, 6, -2, 0, 0, 0}; {-5, 4, 6, 4, -3, 0, -4, 2, 2, -4, 0, 0}; {-3, -1, 6, -3, 1, 0, 4, 2, -5, 3, 0, 0}; {-1, 4, 2, -3, -4, 0, 6, -2, 2, 0, 0, 0}; {-1, 0, 6, -3, 6, -2, 6, -1, -4, 6, 0, 0}; {-3, -1, 6, -2, 3, 1, 0, 5, 3, -2, 0, 0}; {-4, -1, -5, 1, 0, 5, 0, 3, 5, 4, 0, 0}; {0, -1, 3, 5, 4, -1, 4, 5, 0, 4, 0, 0}; {-1, -1, 4, -5, -4, 3, -2, 1, -3, 2, 0, 0}; {2, -4, -4, -1, 2, -3, -4, 4, -1, 2, 0, 0}; {-3, -5, -1, -5, 4, 3, -3, -1, 5, -2, 0, 0}; {-3, 1, -1, 1, 5, 1, -3, 5, 3, 4, 0, 0}; {-2, -3, 2, -1, 3, 4, -3, 2, 5, 2, 0, 0}; {-4, -5, 0, -2, -4, -3, 3, 6, 2, -5, 0, 0}; {0, 0, 6, 5, 8, 6, 6, 8, 1, 6, 11, 7}; {-5, 5, -3, 6, -4, 1, -3, 1, 4, 6, 0, 0}; {-4, 1, 0, 5, 1, 4, -2, 4, 4, 1, 0, 0}; {6, -3, 6, -3, 3, 6, -5, -1, -5, 4, 0, 0}; {4, 2, 6, 4, 6, 0, -4, 0, 3, 6, 0, 0}; {-4, 2, 2, -4, 6, -1, 4, -1, 0, 0, 0, 0}; {-4, 6, -2, -3, 1, -5, 0, 3, 6, 3, 0, 0}; {0, 0, 6, 7, 5, 5, 0, 4, 6, 3, 10, 4}; {-4, -1, -4, 1, -3, 2, 3, -3, 4, 3, 0, 0}; {4,-5, 4, -3, 2, 4, -2, -4, 4, 0, 0, 0}; {-2, 4, 4, 1, -2, 3, 4, -4, 1, -2, 0, 0}; {4, -5, 4, -2, -2, 3, -2, 1, 4, 3, 0, 0}; {0, 0, 6, 9, 6, 10, 5, 9, 8, 1, 11, 9}; {0, 0, 6, 9, 11, 3, 11, 3, 0, 1, 9, 4}; {0, 0, 6, 10, 2, 1, 4, 0, 8, 8, 11, 8}; {-2, -3, 2, 6, 1, -5, -3, 3, 1, -2, 0, 0}; {6, 4, -3, 2, -2, 5, 5, -2, 0, 3, 0, 0}; {4,2,-5, 0, -3, 6, 0, 2, -4, 0, 0, 0}; {3, 0, 4, -2, 0, 6, 0, -3, -5, -3, 0, 0}; {0, 0, 7, 5, 0, 9, 2, 9, 3, 6, 4, 5}; {-3, 5, -4, 2, 2, -2, 2, -1, -4, -3, 0, 0}; {-2, -3, 3, 1, -4, -3, 4, -4, 2, -2, 0, 0}; {-1, 6, -4, 2, -5, 3, 0, -4, -3, -2, 0, 0}; {-3, 2, 2, 6, -1, -5, 3, 3, 0, 3, 0, 0}; {0, 0, 7, 6, 9, 3, 3, 1, 3, 5, 1, 5}; {-3, -5, 0, -2, 2, 4, -3, 2, 5, 2, 0, 0}; {1, -3, 0, -4, 1, -2, -4, 4, -5, -3, 0, 0}; {-3, 6, -2, -5, -4, 2, -2, 1, 4, 6, 0, 0}; {0, 0, 7, 8, 2, 1, 9, 4, 9, 7, 8, 10}; {0, 3, 1, 5, -2, 3, 4, -3, 5, 2, 0, 0}; {-2, 4, 5, 1, -2, 4, 4, -4, 1, -1, 0, 0}; {-5, 0, 0, -5, 4, -3, -5, -1, 3, 0, 0, 0}; {4,-1, 1, -2, 6, -3, -5, -1, -1, -5, 0, 0}; {-4, 0, -1, 6, 0, 1, -5, 3, 5, 1, 0, 0}; {0, 0, 7, 11, 5, 3, 6, 3, 0, 0, 4, 3}; {0, 0, -5, -1, 6, -4, 1, -3, 6, -1, 0, 0}; {0, 0, 7, 11, 10, 11, 4, 3, 7, 0, 8, 8}; {-4, 5, -2, 0, 6, -4, 5, 2, -3, 0, 0, 0}; {0, 4, 4, 2, 2, -3, -1, 4, -2, -5, 0, 0}; {0, 0, 8, 3, 3, 2, 4, 10, 2, 0, 8, 0}; {2, 1, -4, 2, 3, -3, 3, 6, 4, -2, 0, 0}; {4, 2, -4, 2, 5, 1, 6, 5, 5, 6, 0, 0}; {1, -3, 1, 6, 6, -3, 1, 0, -2, 3, 0, 0}; {2, -1, 4, -1, 6, 5, 1, 2, -4, -1, 0, 0}; {4, 2, -4, 4, 1, 5, -4, 4, 6, 0, 0, 0}; {1, -3, 1, -4, 0, -3, -3, 0, 6, 6, 0, 0}; {-3, 5, -3, 4, -2, -4, 6, 4, -5, -4, 0, 0}; {-2, -5, 0, -4, 6, 5, -4, -1, 5, -3, 0, 0}; {0, 0, 8, 8, 0, 10, 8, 2, 7, 2, 9, 0}; {3, -3, -1, 5, 5, 1, 5, 1, -3, -1, 0, 0}; {-4, -5, 2, 1, 6, -3, 3, -3, 1, -1, 0, 0}; {0, 0, 8, 8, 2, 8, 3, 10, 2, 0, 2, 4}; {6, -2, -2, 2, 3, -2, 3, -3, 3, 2, 0, 0}; {-5, 6, 1, 0, 2, -1, 4, -1, 2, -5, 0, 0}; {-2, 1, 0, 3, -3, -1, 5, -2, -5, 4, 0, 0}; {-3, 1, 1, 6, 3, -1, 4, 6, 3, 2, 0, 0}; {6, -1, 0, 6, 5, -4, 2, -3, 1, 0, 0, 0}; {-3, 3, 5, 0, -4, 1, -2, -4, -3, -4, 0, 0}; {-4, 0, 0, 6, 0, -5, -2, -4, -4, 5, 0, 0}; {0, 0, 8, 10, 0, 7, 2, 0, 4, 8, 6, 9}; {4, 1, 6, 5, -3, 5, -2, 2, 5, 2, 0, 0}; {0, 0, 8, 11, 9, 4, 11, 2, 6, 5, 5, 10}; {0, 0, 9, 0, 5, 10, 10, 10, 3, 11, 5, 3}; {-4, 6, 1, 2, -4, 4, -3, -1, 2, -1, 0, 0}; {-1, 5, -4, 6, 1, 6, 4, -4, -3, 3, 0, 0}; {0, 0, 9, 2, 3, 1, 9, 1, 10, 5, 6, 9}; {3, 3, 0, 5, -5, 4, -3, 2, 1, 6, 0, 0}; {-5, 2, 6, -5, -4, -2, 4, -3, 5, 3, 0, 0}; {0, 0, 9, 3, 10, 3, 4, 1, 4, 9, 10, 1}; {-5, 4, -2, 2, -3, -1, 3, 3, -1, -2, 0, 0}; {-2, -3, 5, -1, -2, 3, -4, 3, -5, 0, 0, 0}; {6, 5, 1, -5, -5, 0, 5, 1, 6, -1, 0, 0}; {5, 4, 0, -5, 3, -4, 2, 5, -4, 0, 0, 0}; {-1, 6, -2, 1, -3, -2, -5, 4, -5, -5, 0, 0}; {0, 0, 9, 5, 10, 0, 5, 1, 6, 6, 8, 4}; {3, -2, 2, 5, 5, 5, 6, 1, 6, 4, 0, 0}; {0, 0, 9, 5, 11, 11, 0, 4, 8, 3, 6, 7}; {-4, 3, -5, -1, -5, -4, 6, 4, -5, -5, 0, 0}; {3, -5, -4, -3, 3, -2, -5, 5, 0, 3, 0, 0}; {0, -5, -1, 4, 4, 0, 3, 1, -3, -3, 0, 0}; {0, 5, -5, -2, -1, -3, -4, 3, -3, 3, 0, 0}; {0, 0, 9, 8, 2, 5, 0, 6, 7, 11, 9, 2}; {-2, -2, -5, 6, 0, 5, -1, 4, -3, -3, 0, 0}; {2, -2, 3, -2, 4, 5, 2, 2, 5, 5, 0, 0}; {3, -3, 0, 6, 5, 1, 4, 1, -3, -2, 0, 0}; {2,-2, 3, -1, 6, 5, 1, 2, -4, -1, 0, 0}; {-5, -1, 0, 4, -2, 5, 2, 2, -2, 2, 0, 0}; {4, -5, -5, -1, 4, -1, 2, 0, -2, 5, 0, 0}; {1, 3, 2, 6, 0, -5, -1, -1, 5, 3, 0, 0}; {-5, 2, 6, 3, 4, 6, -1, 0, -3, 6, 0, 0}; {6, -3, -2, 3, -3, 4, -3, -2, 6, 2, 0, 0}; {-4, 0, 2, -3, 3, 0, 4, 6, 3, 1, 0, 0}; {0, 0, 10, 1, 8, 1, 4, 5, 10, 10, 4, 1}; {-4, 2, 6, 3, 4, 6, -1, 0, -3, 6, 0, 0}; {3, -2, 3, 2, -3, 2, 4, 5, -5, 1, 0, 0}; {0, 0, 10, 2, 3, 8, 9, 10, 6, 1, 7, 0}; {2, -4, 0, -2, 6, 6, 1, -4, -2, 0, 0, 0}; {-1, -1, -3, 1, -5, 4, 1, -1, 5, -3, 0, 0}; {1,-4, 1, 0, 2, -2, 2, 5, -5, 4, 0, 0}; {4, -1, 4, 4, -1, 0, -4, 5, -2, 0, 0, 0}; {4, 0, 6, -5, 4, -5, -1, 4, 3, -2, 0, 0}; {1, 6, -3, -4, 2, 6, 2, -1, -2, 2, 0, 0}; {3,-1, 5, -5, 6, -1, 2, 1, 0, 4, 0, 0}; {0, 5, -4, -4, 1, 6, 1, -2, -3, 2, 0, 0}; {0, 0, 10, 5, 5, 10, 3, 9, 10, 2, 9}; {5, 3, -1, 4, 4, -1, 4, -5, 5, -2, 0, 0}; {3, 0, -5, 0, -5, -2, 1, 0, 3, 4, 0, 0}; {1, -1, -5, 2, -4, -3, -2, 4, -4, 0, 0, 0}; {0, 0, 10, 7, 3, 8, 3, 7, 6, 8, 11, 4}; {-3, 4, -3, 1, 5, 2, -1, 0, -2, -4, 0, 0}; {-3, 6, 1, -5, 1, 1, -1, 2, 5, -1, 0, 0}; {5, -3, -1, 1, -2, 5, 2, 3, 0, 4, 0, 0}; {-5, 4, -1, 6, -3, 6, 5, 3, -5, -2, 0, 0}; {1, 0, -3, -4, 1, 5, -2, 5, -2, -3, 0, 0}; {0, 0, 10, 11, 0, 2, 6, 10, 8, 3, 10, 3}; {-2, 4, -4, 3, -4, -5, -1, -1, 3, 3, 0, 0}; {-4, 2, -5, 2, -3, 6, 5, -2, 0, 2, 0, 0}; {-1, 6, 0, -4, -4, 2, 6, -4, -2, 1, 0, 0}; {0, 0, 11, 1, 3, 9, 8, 5, 1, 6, 0, 8}; {6, 1, -5, 4, 4, -1, 3, -5, -4, 0, 0, 0}; {-4, 2, -5, 3, 4, 6, 0, 0, -3, -5, 0, 0}; {0, 0, 11, 4, 1, 7, 8, 1, 3, 9, 0, 9}; {-1, 4, -4, -5, 1, 4, 2, -1, -3, 2, 0, 0}; {-1, 1, 2, -2, 2, -1, 3, -3, 6, 5, 0, 0}; {0, 0, 11, 6, 1, 0, 4, 7, 10, 5, 8, 4}; {-5, 2, -4, -2, 1, 3, -3, 5, 1, 1, 0, 0}; {-5, 3, -2, 1, -4, -1, 3, 3, -1, -2, 0, 0}; {-4, 4, -1, 3, -2, 1, 3, 2, 4, 5, 0, 0}; {3, -3, 2, 4, -3, 5, 3, 4, -1, -2, 0, 0}; {0, 0, 11, 7, 8, 4, 11, 10, 2, 2, 9, 2}; {5, 2, -2, 3, 1, 1, -4, -2, 5, -3, 0, 0}; {6, 3, -1, 5, -5, 3, 6, 5, 5, -2, 0, 0}; {1, -4, 2, 6, -4, 3, 1, 0, -2, -3, 0, 0}; {-5, 4, 0, -5, -5, 5, -5, 2, 5, -2, 0, 0}; {2, -1, -5, 2, 6, 3, 2, 2, -5, -2, 0, 0}; {0, 0, 11, 9, 4, 9, 3, 9, 3, 4, 8, 8}; {5, 1, -4, 2, -4, -1, 1, 0, 3, 4, 0, 0}; {6, 0, 5, -3, 5, 5, 5, 3, -3, -4, 0, 0}; {-5, 1, 6, 0, -4, 5, 5, -3, 0, 1, 0, 0}; {2, -2, 5, 1, 2, -3, 1, 6, -4, -1, 0, 0}; and {1, -4, 2, -3, -1, -2, -3, 0, 5, 6, 0, 0}; and

{0, 0, 0, 0, 3, 6, 0, 10, 6, 3, 8, 1}; {0, 0, 1, 3, 3, 9, 6, 2, 4, 11, 2, 9}; {0, 0, 3, 0, 9, 4, 3, 3, 9, 1, 8, 0}; {0, 0, 3, 1, 10, 11, 8, 2, 6, 1, 2, 7}; {0, 0, 3, 1, 11, 6, 7, 1, 4, 11, 7, 11}; {0, 0, 3, 6, 10, 8, 8, 3, 11, 9, 0, 8}; {0, 0, 3, 7, 1, 4, 7, 6, 4, 0, 5, 2}; {0, 0, 4, 8, 8, 3, 9, 0, 7, 1, 10, 10}; {0, 0, 6, 5, 3, 5, 1, 5, 1, 8, 1, 2}; {0, 0, 6, 6, 1, 3, 4, 4, 5, 0, 6, 0}; {0, 0, 6, 8, 1, 3, 1, 4, 9, 5, 11, 8}; {0, 0, 7, 8, 8, 6, 2, 9, 6, 10, 3, 9}; {0, 0, 7, 8, 10, 9, 11, 2, 9, 1, 8, 4}; {0, 0, 8, 4, 4, 9, 3, 0, 5, 11, 2, 2}; {0, 0, 8, 5, 7, 10, 2, 10, 0, 11, 4, 11}; {0, 0, 8, 6, 9, 3, 11, 3, 4, 0, 4, 5}; {0, 0, 9, 1, 3, 9, 9, 9, 3, 0, 5, 0}; {0, 0, 10, 0, 7, 11, 7, 4, 11, 11, 2, 5}; {0, 0, 10, 11, 2, 7, 8, 2, 10, 2, 8, 4}; and {0, 0, 11, 6, 5, 0, 8, 1, 0, 4, 10, 1}; and

the processing unit is further configured to map the sequence $\{f_n\}$ to N subcarriers to generate a first signal; and
a transceiver unit, configured to send the first signal.

6. The signal processing apparatus according to claim 5, wherein the processing unit is further configured to:

respectively map the N elements in the sequence $\{f_n\}$ to N consecutive subcarriers; or
respectively map the N elements in the sequence $\{f_n\}$ to N equally spaced subcarriers.

7. A sequence-based signal processing apparatus, comprising:

a transceiver unit, configured to receive a first signal carried on N subcarriers; and
a processing unit, configured to obtain N elements in a sequence $\{f_n\}$, wherein $f_n$ is an element in the sequence $\{f_n\}$, the sequence $\{f_n\}$ is a sequence that meets a preset condition, the preset condition is $f_n = A \cdot x_n \cdot e^{2\pi j \cdot a \cdot n}$, a value of n ranges from 0 to N-1, A is a non-zero complex number, $a$ is a real number, $j = \sqrt{-1}$, for an element $x_n$, $x_n = u \cdot e^{2\pi j \cdot s_n / M}$, u is a non-zero complex number, and a set that consists of $\{s_n\}$ consisting of an element $s_n$ comprises at least one of sequences in a first sequence set, wherein the sequences in the first sequence set comprise some or all of the following sequences:

{-2, 4, -2, 4, 0, 2, 2, 0, 5, 5, 0, 0}; {-1, 6, 1, -4, -2, 4, -5, -5, 6, -5, 0, 0}; {3, -3, 3, -3, 0, -2, -2, 0, -5, -5, 0, 0}; {2, -4, 2, -4, -1, -2, -2, -1, -5, 6, 0, 0}; {-4, 2, -4, 3, -1, 1, 2, 1, 4, 5, 0, 0}; {0, 6, 0, -5, -2, -4, -3, -1, 6, 6, 0, 0}; {0, 6, 0, -5, -2, -3, -3, -1, 6, 6, 0, 0}; {-1, 5, -1, 6, -2, -3, -3, -1, 5, 5, 0, 0}; {-4, 2, -4, 4, -4, -5, -4, -2, 5, 5, 0, 0}; {-5, 1, -5, 3, -5, 6, -5, -3, 5, 5, 0, 0}; {4, -2, 4, 0, -4, -1, 0, -1, 3, 4, 0, 0}; {0, 4, -4, 2, -3, -2, -3, 4, 1, -2, 0, 0}; {-1, 3, -5, 1, -4, -3, -3, 4, 1, -2, 0, 0}; {0, 5, -2, 5, 2, 4, 3, 1, -3, -4, 0, 0}; {-3, 1, 5, -1, -5, -4, -5, 3, 0, -3, 0, 0}; {3, -3, 3, -1, 0, 6, -3, -3, -5, -4, 0, 0}; {1, 6, -1, 6, 6, 0, 2, 0, -3, -1, 0, 0}; {5, -2, 3, -2, 0, -1, 0, 0, -5, 6, 0, 0}; {-3, 3, -3, 5, -4, -4, -4, -2, 5, 5, 0, 0}; {-3, 0, 3, -3, 3, 1, 3, -5, 4, 1, 0, 0}; {-1, 4, -3, 5, 4, -2, 1, 0, -3, -2, 0, 0}; {3, -1, -5, -5, 1, -4, 0, 1, 4, -1,

0, 0}; {2, -2, 6, 6, 1, -5, 0, 1, 4, -1, 0, 0}; {0, -5, 2, 2, -5, 1, 4, 4, 6, 1, 0, 0}; {1, -3, 5, 6, 0, -5, -1, 1, 3, -1, 0, 0}; {-3, 4, -1, -1, 5, -1, 3, 4, 5, 0, 0, 0}; {-5, 1, -5, 6, -1, 4, -5, -5, -5, 1, 0, 0}; {-2, 5, 0, 0, 6, 0, 3, 4, 5, 0, 0, 0}; {-5, 1, -5, 6, -1, 5, -5, 6, -5, 1, 0, 0}; {3, -3, 3, 3, -4, 2, 5, 5, 6, 0, 0, 0}; {-3, 3, -3, -3, 4, -2, -5, -5, 6, 0, 0, 0}; {4, -3, 2, 2, -4, 1, -2, -3, -5, 0, 0, 0}; {5, -1, 5, 6, 1, -5, 5, 6, 5, -1, 0, 0}; {5, -1, 5, 6, 1, -4, 5, 5, 5, -1, 0, 0}; {3, -4, 1, 1, -5, 1, -3, -4, -5, 0, 0, 0}; {-1, 3, -5, 6, 0, 5, 1, -1, -3, 1, 0, 0}; {0, 5, -2, -2, 5, -1, -4, -4, 6, -1, 0, 0}; {-2, 2, 6, 6, -1, 5, 0, -1, -4, 1, 0, 0}; {-2, 2, 6, 6, 0, 5, 1, -1, -3, 1, 0, 0}; {-3, 1, 5, 5, -1, 4, 0, -2, -4, 1, 0, 0}; {-3, 1, 5, 5, -1, 4, 0, -1, -4, 1, 0, 0}; {-2, 3, -4, -3, 4, -2, -5, -5, 6, -1, 0, 0}; {3, 0, -3, 3, -3, -1, -3, 5, -4, -1, 0, 0}; {4, -2, 4, -4, 4, 5, 4, 2, -5, -5, 0, 0}; {-5, 2, -3, 2, 0, 1, 0, 0, 5, 6, 0, 0}; {-1, 5, -1, 3, 5, 1, 1, 6, 5, -1, 0, 0}; {0, -5, 2, -5, -2, -4, -3, -1, 3, 4, 0, 0}; {4, -2, 4, -3, 6, 6, 4, 3, -5, -5, 0, 0}; {2, -4, 2, -5, 4, 5, 3, 2, -5, -5, 0, 0}; {-3, 3, -3, 2, 0, -5, 4, 3, -1, 0, 0, 0}; {0, 6, 0, 5, 3, 4, 3, 1, 6, 6, 0, 0}; {6, 0, 6, -1, 2, 0, -1, 0, -4, -5, 0, 0}; {-4, 4, 1, -4, -4, 0, 4, 0, 3, -1, 0, 0}; {-1, 5, 0, 5, 3, 3, 2, 1, 6, -5, 0, 0}; {-3, 2, -4, 0, -2, -4, -5, 4, -4, -4, 0, 0}; {-1, 6, 2, -4, -2, -3, 4, -5, -1, 2, 0, 0}; {5, -2, 4, -3, 5, 6, 5, 3, -5, -5, 0, 0}; {-1, 5, 0, 6, -3, -4, -4, -2, 6, 6, 0, 0}; {-5, 1, -4, 3, -5, 6, -5, -3, 5, 5, 0, 0}; {5, -3, 2, -5, -3, 6, 3, -4, 6, 0, 0, 0}; {3, -5, 0, 5, -4, 5, 2, -5, 5, 0, 0, 0}; {0, 5, -1, 5, 5, -2, -2, 2, 2, 2, 0, 0}; {-5, 0, 6, 0, 2, 0, 0, 1, -4, -5, 0, 0}; {-4, 1, -5, 3, -5, 6, -4, -3, 5, 5, 0, 0}; {-3, 1, 6, 1, -5, -4, -4, 3, 1, -2, 0, 0}; {6, -3, 1, -5, 1, 0, 1, 6, 3, 0, 0, 0}; {-5, -1, 4, 0, 3, -3, -4, 2, 0, -2, 0, 0}; {5, 0, -4, -4, 2, -3, 1, 2, 4, -1, 0, 0}; {3, -2, 6, 6, 1, -4, 0, 1, 4, -1, 0, 0}; {-1, 5, 0, 0, 5, 0, 4, 4, 5, 0, 0, 0}; {5, -1, 6, 6, -1, -2, 4, 6, 2, 0, 0, 0}; {-1, 5, 0, 0, 6, 0, 3, 4, 5, 0, 0, 0}; {-1, 4, -2, -2, 4, -1, -4, -4, 6, -1, 0, 0}; {-5, -1, 4, 3, -3, 3, -1, -2, -4, 0, 0, 0}; {-3, 1, 6, 5, -1, 4, 0, -2, -3, 1, 0, 0}; {-2, 3, -3, -3, 4, -2, -5, -5, 6, -1, 0, 0}; {-5, -1, 4, 3, -2, 3, -1, -2, -4, 0, 0, 0}; {-4, 1, -5, -5, 3, -3, 6, 6, 6, -1, 0, 0}; {6, -2, 3, 2, -3, 2, -1, -3, -4, 0, 0, 0}; {3, 6, -2, -3, 3, -5, 3, 1, -2, 2, 0, 0}; {-5, -1, 4, 4, -3, 3, -1, -2, -4, 1, 0, 0}; {6, -2, 3, 3, -3, 3, -1, -2, -4, 0, 0, 0}; {5, -3, 2, 2, -4, 2, -2, -3, -5, 0, 0, 0}; {5, 1, -2, 4, -2, 0, -3, 6, -4, -1, 0, 0}; {3, -2, 6, -1, 4, 5, 1, -2, -2, 0, 0, 0}; {5, -1, -5, -1, 1, 3, -3, 3, 3, 1, 0, 0}; {4, 1, 0, -5, 1, 6, 2, 2, 5, -3, 0, 0}; {3, -1, -3, 3, -3, -1, 6, -4, -5, -1, 0, 0}; {1, -3, -5, 1, -5, -2, 6, -5, 6, -3, 0, 0}; {2, -5, 2, -5, 4, 5, 3, 2, -5, -5, 0, 0}; {-1, 3, -3, 1, 0, 4, 1, -5, 6, 2, 0, 0}; {-2, 2, -4, 0, -1, 3, 1, 6, 5, 3, 0, 0}; {5, -1, -5, 2, -5, -1, 3, 5, 4, 4, 0, 0}; {5, -1, -5, 2, -5, -1, 3, 6, 5, 4, 0, 0}; {0, 4, -2, 3, 6, 4, 0, 6, 4, 0, 0, 0}; {-3, 3, -1, 6, -5, -2, -4, -2, 3, 3, 0, 0}; {-4, -1, 4, -3, -1, -5, 3, -4, 5, 0, 0, 0}; {-5, -2, 3, -4, -2, -5, 4, -4, 6, 0, 0, 0}; {0, 4, -2, 4, -2, -3, -1, -1, 4, 3, 0, 0}; {6, -3, 2, -5, 4, -5, -5, -3, 6, 3, 0, 0}; {6, -2, 4, -2, -4, 1, 0, 4, 4, 2, 0, 0}; {6, -2, 4, -2, -3, 2, 1, 5, 4, 2, 0, 0}; {4, -3, 4, 0, 0, 6, -5, -1, 1, -1, 0, 0}; {-1, 2, -5, 1, 0, 4, 3, 6, 5, 3, 0, 0}; {3, 5, -3, 2, 3, -1, 6, -1, -5, 1, 0, 0}; {-2, 1, 6, 0, -5, -4, -2, -2, 4, 2, 0, 0}; {-3, 2, -3, 6, -3, 3, 4, -1, -2, -3, 0, 0}; {1,3,-5, 1, 2, -3, 4, -3, 5, 0, 0, 0}; {0, 2, 6, 0, 1, -3, 4, -3, 5, 0, 0, 0}; {-3, -1, 3, -2, 6, -2, -5, -3, -5, 5, 0, 0}; {0, 3, -4, -5, 1, 6, 1, 0, -3, 1, 0, 0}; {-4, 3, 0, 4, -4, -3, 4, 0, 0, -1, 0, 0}; {-4, 4, 2, -5, 0, 3, -2, -5, -2, 0, 0, 0 1; {-5, 3, 1, 6, -1, 2, -2, -5, -2, 0, 0, 0}; {5, 1, 0, 5, -2, 2, -3, 6, -2, 0, 0, 0}; {-4, 4, 3, -3, 3, -5, 4, 5, 5, -4, 0, 0}; {4, -1, -3, 3, -3, -1, -5, -4, 6, -2, 0, 0}; {-1, 5, 2, -4, -4, 1, 5, -1, 1, 0, 0, 0}; {-3, 3, 0, 6, -5, -1, -5, -2, 3, 2, 0, 0}; {2, 6, 1, 6, 6, -1, -2, 4, 3, 1, 0, 0}; {-1, 2, -4, 0, 0, 4, 2, -5, 5, 2, 0, 0}; {-2, 4, 1, -4, 3, -5, -1, 4, 4, 3, 0, 0}; {-5, -1, 6, -1, -3, 1, 2, -5, 4, 2, 0, 0}; f 4, -4, 3, -4, -5, 0, -1, 4, 4, 1, 0, 0}; {4, -4, 3, -4, -5, 0, -1, 4, 4, 2, 0, 0}; {2, 5, -1, 3, 1, 5, 3, -4, 6, 3, 0, 0}; {1, 4, -2, 3, 1, 5, 3, -5, 6, 3, 0, 0}; {3, -4, 4, -1, -1, 5, 6, -1, 1, -1, 0, 0}; {-2, 1, -5, 0, -1, 3, 2, 6, 5, 3, 0, 0}; {-2, 4, 1, -3, 3, -5, 0, 3, 3, 3, 0, 0}; {6,-2, 5, -1, 5, 5, -4, -4, 5, 5, 0, 0}; {5, -3, 4, -2, 5, 5, -5, -4, 5, 5, 0, 0}; {5,-2, 6, 1, 0, 6, -5, 0, 2, 0, 0, 0}; {1, 4, -2, 3, 0, 4, 4, -4, 6, 3, 0, 0}; {0, 2, -5, 0, 1, -3, 4, -3, 5, 0, 0, 0}; {-2, 0, 5, -2, 0, -4, 4, -3, 6, 0, 0, 0}; {5, -5, 0, 6, 3, -5, 5, -4, 6, 5, 0, 0}; {-5,-2,4,-1, 5, -4, -5, 3, 0, -2, 0, 0}; {-3, -1, 4, 2, 4, -1, 6, 1, 0, 4, 0, 0}; {5, -5, 1, -1, 2, -3, 4, -1, -1, 3, 0, 0}; {-2, -5, -4, 2, -3, 2, 0, 2, 3, -5, 0, 0}; {0, -5, 6, -1, 3, 6, 1, -3, -1, -1, 0, 0}; {5, 0, -1, 5, 5, -3, 3, -2, 1, 0, 0, 0}; {1, -4, -5, 1, 3, -5, 1, -3, 0, -1, 0, 0}; {-5, 2, 1, -5, -2, 3, -3, 6, -2, 0, 0, 0}; {0, 6, 4, -2, -4, 1, 5, -1, 1, 1, 0, 0}; {-1, 4, 1, -5, -3, 3, 4, -1, 0, -2, 0, 0}; {-2, 4, 2, -3, 1, 5, 4, 5, -1, 2, 0, 0}; {-3, -1, 5, -2, -1, -5, 3, -4, 5, -1, 0, 0}; {-5, -3, 3, -4, -2, 6, 1, -5, 4, -1, 0, 0}; {6, -5, 0, 4, 5, 0, -5, -1, -5, 1, 0, 0}; {0, 4, 0, -5, -1, 4, 5, 1, -1, -3, 0, 0}; {2, -3, -3, 3, 5, 1, -4, 1, -2, -1, 0, 0}; {-3, 3, 2, -4, -3, 5, -1, 3, 0, 0, 0, 0}; {-4, 2, 1, -5, -4, 4, -2, 2, 0, 0, 0, 0}; {-3, -1, 6, -4, 6, -2, 5, -1, -4, 5, 0, 0}; {1,-4,-4, 3, 2, 6, 0, -3, 0, -1, 0, 0}; {-1, 5, 4, -2, -4, 0, 5, 0, 2, 1, 0, 0}; {0, -5, -5, 2, 1, 6, 0, -4, -1, -1, 0, 0}; {-1, 6, 6, 1, 1, 6, 0, -4, -1, -1, 0, 0}; {-4, 2, 1, -5, 6, -1, 3, -2, 1, 0, 0, 0}; {-3, 4, 4, -1, -1, 5, -2, 6, -2, -2, 0, 0}; {-4, 3, 3, -2, -2, 4, -2, 6, -2, -1, 0, 0}; {-4, 3, 3, -2, -1, 4, -2, -5, -1, -1, 0, 0}; {-5, 1, 0, 6, 6, -2, 4, -1, 1, 0, 0, 0}; {-4, 3, 3, -2, -1, 4, -1,

-5, -1, -1, 0, 0}; {3, 5, 0, 3, -4, 4, 2, -5, 5, -1, 0, 0}; {-3, 3, 2, -3, 6, -3, 3, 0, 1, -1, 0, 0}; {1, 4, 0, -5, -1, 4, 5, 1, -1, -4, 0, 0}; {-3, -2, 4, -2, -1, -5, 2, -5, 4, -1, 0, 0}; {-4, 2, 2, -5, -3, 4, -2, 3, 0, 0, 0, 0}; {5, -3, -5, -1, -3, 4, -4, -3, 5, 4, 0, 0}; {-5, 3, 5, 1, 3, -4, 4, 3, -5, -4, 0, 0}; {6, 0, 0, 6, -5, 3, -2, 2, -1, 0, 0, 0}; {6, 0, 0, 6, -5, 3, -2, 3, -1, 0, 0, 0}; {-4, 2, 2, -4, 6, -2, 4, -1, 1, 1, 0, 0}; {-5, 1, 1, -5, 5, -3, 3, -2, 1, 1, 0, 0}; {6, 0, 0, 6, 5, -3, 2, -2, 1, 0, 0, 0 1; {6, 0, 0, 6, 5, -3, 3, -2, 1, 0, 0, 0 1; {4, -2, -2, 5, 3, -4, 2, -3, 0, 0, 0, 0}; {6, 3, -5, 2, -4, 6, 5, 3, 6, -5, 0, 0}; {-3, -5, 0, -3, 4, -4, -2, 5, -5, 1, 0, 0}; {-4, 3, 5, -1, -5, 2, 6, -5, 0, 0, 0, 0}; {4, -2, -1, 5, 4, -4, 2, -2, 0, 0, 0, 0}; {-1, 4, 4, -3, -2, 6, 0, 3, 0, 1, 0, 0}; {0, -5, -3, 4, -4, 5, 1, -5, -5, -2, 0, 0}; {5, -2, -2, 3, 0, 4, -4, 3, 1, 2, 0, 0}; {0, 6, -5, 2, 0, 5, 0, -4, -1, 0, 0, 0}; {-2, 3, 3, -3, -5, -1, 4, -1, 2, 1, 0, 0}; {3, -4, -4, 2, -2, 1, -5, 3, 1, 1, 0, 0}; {2, -4, -3, 4, 1, 6, 1, -3, -1, 0, 0, 0}; {0, 4, 3, -4, 3, 6, -1, 6, 4, 2, 0, 0}; {-5, 5, -1, 1, -2, 3, -4, 1, 1, -3, 0, 0}; {-1,-3, 3, -4, 6, 3, -2, 0, -5, -1, 0, 0}; {-4, 4, -4, 1, -5, -4, 6, 4, -5, -5, 0, 0}; {6, 5, 0, -4, -5, 0, 5, 1, 5, -1, 0, 0}; {5, 3, -3, 4, 2, 6, -1, 5, -4, 1, 0, 0}; {3, 1, -5, 2, 1, 5, -3, 4, -5, 1, 0, 0}; {4, -1, 2, -5, 0, -1, -3, -5, -4, -3, 0, 0}; {3, -2, 1, -5, 1, -2, -4, 6, -5, -3, 0, 0}; {-4, 1, 2, -5, -4, 4, -2, 5, 0, 1, 0, 0}; {2, -4, -2, 4, 0, 5, -3, -3, 1, -1, 0, 0}; {5, -2, -1, 5, 2, -3, 3, 6, 2, 0, 0, 0}; {2, 5, 4, -2, 3, -2, 0, -2, -3, 5, 0, 0}; {-5, -1, 0, -5, 2, -2, 3, 6, 2, 0, 0, 0}; {3, 1, -4, -2, -4, 1, 6, -1, 0, -4, 0, 0}; {2,-1, 5, -2, -5, 5, 0, 1, -4, -1, 0, 0}; {2, 0, -5, 2, 0, 4, -4, 3, 6, 0, 0, 0}; {0,-2, 5, 0, -1, 3, -4, 3, -5, 0, 0, 0}; {4,-1, 3, -4, 2, -1, -4, 6, -5, -4, 0, 0}; {2, -4, -1, 3, -3, 5, 0, -3, -3, -3, 0, 0}; {4, -2, 1, 6, 0, -1, -3, -5, -4, -3, 0, 0}; {-1, 5, -4, 1, -5, 3, -1, -4, -4, -3, 0, 0}; {-2, 4, -5, 0, 6, 2, -1, -4, -4, -3, 0, 0}; {3, -3, 0, 6, 5, 1, 5, 2, -3, -2, 0, 0}; {5, 2, -4, 5, 1, 5, -4, 4, 6, 0, 0, 0}; {3, 3, 0, 1, -5, 0, 6, 2, -4, -4, 0, 0}; f 4, -4, -3, 3, -3, 5, -4, -5, -5, 4, 0, 0}; {-1, 3, 5, -1, 5, 2, 6, 5, 6, 3, 0, 0}; {-3, 1, 3, -3, 3, 1, 6, 4, 5, 1, 0, 0}; {-4, -1, 0, 5, -1, 6, -2, -2, -5, 3, 0, 0}; {-5, -1, 1, -4, 2, -1, 3, 6, 4, 1, 0, 0}; {5, -3, -1, 6, 1, -2, 2, 5, 2, 0, 0, 0}; {4, -4, -2, 5, 0, -3, 2, 5, 2, 0, 0, 0}; {4, -3, 0, -4, 4, 3, -4, 0, 0, 1, 0, 0}; {4, -2, 2, -1, -1, 6, -1, -3, -5, -4, 0, 0}; {0, -3, 4, 5, -1, 6, -1, 0, 3, -1, 0, 0}; {0, -2, 6, 0, -1, 3, -4, 3, -5, 0, 0, 0}; {-1,-3, 5, -1, -2, 3, -4, 3, -5, 0, 0, 0}; {-5, 2, -5, -1, 6, -5, 6, 4, -5, -5, 0, 0}; {-5, 3, -3, 2, -2, 0, 1, 0, 4, 5, 0, 0}; {-3, -5, 3, -2, -3, 1, 6, 1, 5, -1, 0, 0}; {-3, 5, -1, 5, -1, 1, 2, 1, 4, 5, 0, 0}; {-4, 4, -2, 4, -2, 1, 2, 1, 4, 5, 0, 0}; {-5, 3, -3, 3, -2, 0, 1, 0, 4, 5, 0, 0}; {4, -1, 4, -3, 4, 5, 5, 3, 6, 6, 0, 0}; {1, -4, 1, 6, 1, 2, 6, 5, 1, -1, 0, 0}; {2, -3, 2,

-5, 3, 4, 4, 2, 6, 6, 0, 0}; {5, 2, -3, 4, 2, 5, -4, 4, 6, 0, 0, 0}; {4, 1, -4, 3, 1, 5, -3, 4, -5, 0, 0, 0}; {-5, 3, -3, 5, 3, -5, -3, 4, 6, 0, 0, 0}; {-2, 6, 0, -4, 4, -5, -2, 5, -5, 0, 0, 0}; {3, -2, 3, -1, 0, 6, -2, -3, -5, -4, 0, 0}; {0, -5, 0, -4, 1, 3, 2, 1, 5, 5, 0, 0}; {-1, 6, 0, -4, 3, 2, 2, -4, -1, 2, 0, 0}; {6, 1, -5, 3, -5, 6, -5, -2, 3, 4, 0, 0}; {-1, 5, -2, 6, -1, 2, 2, 0, 4, 4, 0, 0}; {-3, 2, 6, 1, -4, -5, -1, 2, 2, 0, 0, 0}; {-5, -1, 2, -4, 2, 0, 3, 6, 4, 1, 0, 0}; {5, -1, 4, 1, -2, -3, 3, -4, -2, -1, 0, 0}; {0,-4, 3, 3, -4, -4, 0, 4, 0, 1, 0, 0}; {-5, 3, -2, -2, 4, -2, 2, 3, 5, 0, 0, 0}; {6, 2, -3, -3, 3, -3, 1, 2, 4, 0, 0, 0}; {5, 1, -4, -4, 3, -3, 1, 2, 4, -1, 0, 0}; {6, 2, -3, -2, 3, -2, 1, 3, 4, 0, 0, 0}; {4, -1, 5, 5, -3, 3, 6, 6, 6, 1, 0, 0}; {5, 1, -4, -3, 2, -3, 1, 2, 4, 0, 0, 0}; {5, 1, -4, -3, 3, -3, 1, 2, 4, 0, 0, 0}; {2, -3, 3, 3, -4, 2, 5, 5, 6, 1, 0, 0}; {1, -4, 2, 2, -4, 1, 4, 4, 6, 1, 0, 0}; {1,-5, 0, 0, 6, 0, -3, -4, -5, 0, 0, 0}; {-5, 1, 6, 6, 1, 2, -4, 6, -2, 0, 0, 0}; {1,-5, 0, 0, -5, 0, -4, -4, -5, 0, 0, 0}; {-3, 2, 6, 6, -1, 4, 0, -1, -4, 1, 0, 0}; {-5, 0, 4, 4, -2, 3, -1, -2, -4, 0, 0, 0}; {6, -1, 3, 3, -2, 3, -1, -3, -4, 1, 0, 0}; {-1,-3,6, 0, 3, -1, 2, 3, 3, -4, 0, 0}; {6, 3, -1, 5, -1, 0, -1, 6, -3, 0, 0, 0}; {6, 2, -3, 2, -4, -1, 3, 4, -1, -1, 0, 0}; {3, -2, 4, -4, 3, 4, 5, 3, 6, 6, 0, 0}; {4, -1, 5, -3, 5, 6, 4, 3, -5, -5, 0, 0}; {1, -4, 2, 6, 2, 3, 4, 2, 6, 6, 0, 0}; {1, -4, 2, -5, 3, 4, 3, 2, 6, 6, 0, 0}; {-2, 5, -1, 4, 1, 2, 2, 1, 5, 6, 0, 0}; {5, -1, 4, -3, 5, 6, 5, 3, -5, -5, 0, 0}; {-5, 3, -2, 5, 3, 6, -3, 4, 6, 0, 0, 0}; {-3, 4, -2, 4, -1, 1, 2, 1, 4, 5, 0, 0}; {-5, 2, -4, 2, -2, 0, 1, 0, 4, 5, 0, 0}; {-3, 5, 0, -5, 4, -5, -2, 5, -5, 0, 0, 0}; {6, 0, 5, -1, -5, -5, 5, 4, -4, -4, 0, 0}; {2,-4, 1, -5, 3, 4, 4, 2, 6, 6, 0, 0}; {2,-4, 1, -5, 4, 4, 4, 2, 6, -5, 0, 0}; {-1, 6, 0, -5, -2, -4, -3, -1, 5, 5, 0, 0}; {-1, 6, 0, -5, -2, -3, -3, -1, 5, 5, 0, 0}; {-4, 3, -3, 4, -4, -5, -4, -2, 5, 5, 0, 0}; {-5, 2, -4, 3, -5, 6, -5, -3, 5, 5, 0, 0}; {-5, 2, -4, 3, -4, -5, -5, -1, 2, 4, 0, 0}; and {-2, 5, -1, 6, -1, 2, 3, 1, 4, 5, 0, 0};

{-3, 2, -5, 0, -1, -3, -5, 5, -3, -4, 0, 0}; {6, 0, 6, 0, 4, -5, -4, 2, 0, -2, 0, 0}; {0, 0, 0, 1, 10, 8, 5, 0, 4, 9, 10, 2}; {1, -5, 1, -3, -5, -1, -1, 6, -5, 1, 0, 0}; {-4, 1, 6, 1, -2, 6, 0, 2, 4, 3, 0, 0}; {-3, 1, 5, 0, -5, -3, -4, 3, 0, -2, 0, 0}; {4, 5, 6, -2, 3, -1, 4, -1, -2, 4, 0, 0}; {-4, -1, 2, -4, 6, -2, -4, -5, -4, 3, 0, 0}; {-2, 3, -4, 4, 5, 6, 1, 1, -3, -5, 0, 0}; {0, 0, 0, 4, 8, 11, 9, 6, 10, 5, 0, 11}; {2, -4, 2, 1, 6, 4, -5, -1, 3, 1, 0, 0}; {5, 3, 1, 5, 1, 3, -2, 5, 6, -3, 0, 0}; {4, 6, -4, 4, -3, 6, 0, 6, 6, 3, 0, 0}; {-4, 0, 4, 3, -2, 3, -1, -2, -5, 0, 0, 0}; {-5, -5, -5, 2, 6, -2, 6, 4, -3, 6, 0, 0}; {-2, -4, 6, 0, 5, -3, -5, 3, -4, -1, 0, 0}; {1, -2, -5, 0, 5, 0, 3, 2, 4, 6, 0, 0}; {2, -3, 4, -4, -5, 6, -1, -1, 3, 5, 0, 0}; {4, 0, -4, 2, 1, 4, -4, 3, 5, 0, 0, 0}; {3,-2, 5, -2, 0, -2, -3, 3, 3, -2, 0, 0}; {5,-1, 5, -2, 0, 0, -1, 0, -4, 6, 0, 0};

{6, 1, -3, 3, -4, 0, 4, 6, 6, 5, 0, 0}; {6, 0, -5, 1, 0, 2, 0, 0, 5, 5, 0, 0}; {-1, 6, 2, -2, 3, -4, 0, 3, 3, 3, 0, 0}; {-1, 5, 0, -5, 3, 2, 2, -5, -2, 1, 0, 0}; {1, 6, 0, -5, 4, -2, 0, 3, 3, 3, 0, 0}; {0, 0, 1, 3, 11, 7, 11, 4, 5, 0, 0, 7}; {6, -3, 1, -5, -2, -5, 3, -4, 6, 1, 0, 0}; {0, 2, 5, -2, 5, 3, 3, -3, 4, 0, 0, 0}; {-4, 1, -5, 4, -4, -5, -4, -2, 5, 4, 0, 0}; {2, 4, -5, 1, 5, 0, -5, 5, 3, -1, 0, 0}; {0, 0, 1, 5, 9, 2, 10, 3, 0, 8, 4, 4}; {-2, -1, 1, -5, 3, 6, 2, 0, -1, 6, 0, 0}; {0, 0, 1, 6, 3, -1, 4, 6, 1, 5, 0, 0}; {-5, 1, -4, -5, -1, 5, -5, -5, -4, 2, 0, 0}; {1, -5, 2, 1, 5, 0, 1, -3, -5, -4, 0, 0}; {-4, 0, 5, 2, -3, -4, 4, -2, 1, 1, 0, 0 1; {0, 0, 1, 6, 11, 3, 10, 7, 4, 11, 2, 1}; {5, -1, 6, 6, 5, 2, -5, 4, 6, -4, 0, 0}; {-2, -5, 5, -4, 4, 6, 1, 6, -4, -4, 0, 0 1; {-4, 3, -1, 0, 6, 6, -1, 3, -1, -1, 0, 0}; {0, 0, 1, 9, 0, 1, 6, 1, 8, 8, 5, 0}; {0, 0, 1, 9, 2, 5, 4, 8, 5, 1, 0, 6}; {-1, -5, 4, -4, 3, 5, 0, 6, -5, -1, 0, 0}; {0, 0, 1, 10, 1, 8, 11, 3, 2, 8, 7, 2}; {2, -4, 3, -5, -5, 5, -2, 0, 4, 4, 0, 0}; {2, -4, 3, -5, -5, 5, -1, 0, 3, 4, 0, 0}; {0, 0, 2, 0, 8, 9, 6, 10, 3, 9, 9, 2}; {-3, 1, -5, -2, -2, 3, -1, 6, 5, 1, 0, 0}; {3, -4, 3, -4, 5, 5, 2, 2, -4, -3, 0, 0}; {-1, 0, 3, 4, -1, -5, 2, -5, 2, 3, 0, 0}; {-5, 0, -5, 1, 3, -4, -4, 2, 1, 0, 0, 0}; {4, -5, 0, 4, 2, 6, 3, -4, 6, 4, 0, 0}; {0, 4, -2, 4, -3, -4, -1, -2, 6, 5, 0, 0}; {5,-4, 1, 6, 1, -1, 1, 0, 6, 3, 0, 0}; {-1, 6, 3, 1, 6, -1, -2, 0, -5, -1, 0, 0}; {3, 6, -1, 5, 0, -2, 0, -2, -4, -5, 0, 0}; {3,-3, 5, 2, 2, -3, 1, -5, -3, -1, 0, 0}; {4,-5, 0, -5, -4, 0, 2, 1, 5, 1, 0, 0}; {-3, 0, 5, 0, -5, -3, -5, 3, 0, -2, 0, 0}; {0, 0, 2, 7, 6, 4, 11, 8, 5, 9, 4, 7}; {-3, 0, 5, 2, -5, 3, -1, -2, 2, 2, 0, 0}; {-1, -1, 1, -4, 6, -3, 3, -2, -1, 5, 0, 0}; {3, 6, -1, -2, 3, -5, 3, 1, -2, 2, 0, 0}; {3, -1, -3, 1, 2, 5, 3, -5, 1, 4, 0, 0}; {0, 0, 2, 10, 4, 0, 11, 9, 6, 0, 3, 5}; {4, -2, 6, -3, -4, 6, 1, 0, 3, 6, 0, 0}; {-1, 0, 3, 1, 0, -5, -2, 5, 1, 6, 0, 0}; {0, 0, 2, 11, 10, 4, 6, 9, 3, 8, 2, 9}; {0, 0, 2, 11, 11, 5, 6, 2, 5, 10, 6, 1}; {-5, -2, 4, 4, -2, 3, 0, -2, -4, 0, 0, 0}; {6, 6, -3, -5, 3, -2, 2, -4, 3, 5, 0, 0}; {0, -4, -5, 1, -5, -2, 5, -4, -5, -1, 0, 0}; {-4, 4, 3, -2, 1, 5, -1, -4, -1, -2, 0, 0}; {2, -5, 3, -4, 3, 3, 6, -5, 4, 5, 0, 0}; {0, 0, 3, 3, 7, 1, 5, 3, 1, 11, 7, 11}; {0, 0, 3, 3, 11, 8, 5, 7, 3, 6, 11, 4}; {1, 6, 2, -4, -2, 0, -2, -1, 4, 3, 0, 0}; {0, 0, 3, 4, 11, 1, 7, 10, 5, 11, 6, 3}; {2, -2, -3, -5, 0, 5, -4, -4, 1, -3, 0, 0}; {-3, 5, 4, 3, -3, 2, 5, -5, 0, -3, 0, 0}; {0, 0, 3, 6, 5, 2, 7, 4, 3, 1, 7, 0}; {-3, 1, -4, 3, 6, -2, -3, 5, 1, -1, 0, 0}; {-1, 2, -4, 2, -4, 6, 1, 2, -2, -2, 0, 0}; {-1, 2, -4, 2, -4, -4, -1, -2, 4, 2, 0, 0}; {0, 0, 3, 8, 2, 2, 9, 7, 6, 2, 6, 3}; {0, 0, 3, 8, 10, 7, 4, 3, 8, 4, 8, 6}; {3, 2, 4, -3, 6, -1, 5, 0, 1, 5, 0, 0}; {2, 1, 3, -4, 5, -2, 5, 0, 1, 5, 0, 0}; {-5, 3, 2, 5, 3, 0, 4, -3, 5, -4, 0, 0}; {-3, 0, 6, 5, 0, 2, -4, 4, -1, -1, 0, 0}; {0, 0, 4, 0, 6, 1, 9, 7, 6, 2, 5, 8}; {-2, 1, -4, -4, 4, -4, 3, -1, -4, -2, 0, 0}; {0, 0, 4, 1, 8, 3, 5, 3, 2, 9, 11, 4}; {5, 1, 1, 6, -1, 2, -2, -5, -3, -3, 0, 0}; {-5, 4, 5, -1, 6, -5, 1, 5, 5, -2, 0, 0}; {6, 3, 4, 0, 6, 4, -2, 4, 6, -2, 0, 0}; {-5, 6, -3, -5, 3, -1, 2, -2, 3, 6, 0, 0}; {-2, 2, -2, 1, 5, -2, -2, 6, 4, -1, 0, 0}; {-5, -1, -5, -2, 4, -1, -4, 4, 5, 6, 0, 0}; {6, 6, -2, -3, 4, -2, 5, -3, 3, 3, 0, 0}; {3, 3, -5, -5, 1, -3, 3, -4, 2, 3, 0, 0}; {1, 4, -1, 4, -3, -3, 0, -2, 6, 2, 0, 0}; {6, 1, 0, -2, 3, -5, -2, -3, 2, -2, 0, 0}; {3, -5, 3, -1, -5, 6, 2, 5, -2, 0, 0, 0}; {0, 1, 6, -1, 6, 3, 4, -1, -2, 2, 0, 0}; {0, 0, 4, 8, 6, 2, 2, 11, 3, 4, 0, 5}; {-1, 6, 5, 4, -2, 1, -2, 0, 1, -4, 0, 0}; {6, -4, 2, -4, -1, 4, 1, -5, 3, 0, 0, 0}; {0, 4, 0, -4, 2, -2, -2, 6, -4, 0, 0, 0}; {0, 0, 4, 8, 10, 3, 11, 4, 2, 2, 11, 6}; {-3, 1, -3, 6, -4, 6, 5, -1, -5, -4, 0, 0}; {1, 3, -3, 4, 6, -3, 2, 0, 5, 1, 0, 0}; {0, 0, 4, 10, 2, 4, 7, 6, 10, 7, 5, 3}; {1, 4, -1, -3, -1, -4, 5, -2, -2, -5, 0, 0}; {0, 0, 4, 11, 11, 0, 11, 9, 3, 5, 2, 8}; {5, 1, 2, 6, 0, 2, -2, 6, -3, -4, 0, 0}; {3, -3, -4, -1, 3, -2, -5, -5, -1, 4, 0, 0}; {0, 0, 5, 2, 1, 2, 1, 9, 6, 10, 3, 8}; {0, 0, 5, 2, 1, 5, 2, 5, 0, 10, 0, 7}; {2, -4, -5, -1, 2, -4, -4, 4, -1, 1, 0, 0}; {5, 2, 4, -1, 5, 6, 1, 5, 5, -3, 0, 0}; {5, 0, 0, 5, -4, 3, 5, 1, -3, 0, 0, 0}; {0, -3, -1, -5, 2, -3, -4, 3, -5, -2, 0, 0}; {0, -4, -3, 4, -2, -5, 1, 6, -5, -1, 0, 0}; {-3, -5, -2, -4, 4, -4, 1, 6, -4, 6, 0, 0}; {3, 6, 2, 5, -5, 2, -2, 5, 5, 5, 0, 0}; {2, -4, -5, 1, 1, -5, 2, 6, 1, 1, 0, 0}; {-4, 2, 1, -4, -2, 3, -3, 6, -2, 0, 0, 0}; {-5, 4, 6, 4, -3, 0, -4, 2, 2, -4, 0, 0}; {-3, -1, 6, -3, 1, 0, 4, 2, -5, 3, 0, 0}; {-1, 4, 2, -3, -4, 0, 6, -2, 2, 0, 0, 0}; {-1, 0, 6, -3, 6, -2, 6, -1, -4, 6, 0, 0}; {-3, -1, 6, -2, 3, 1, 0, 5, 3, -2, 0, 0}; {-4, -1, -5, 1, 0, 5, 0, 3, 5, 4, 0, 0}; {0, -1, 3, 5, 4, -1, 4, 5, 0, 4, 0, 0}; {-1, -1, 4, -5, -4, 3, -2, 1, -3, 2, 0, 0}; {2, -4, -4, -1, 2, -3, -4, 4, -1, 2, 0, 0}; {-3, -5, -1, -5, 4, 3, -3, -1, 5, -2, 0, 0}; {-3, 1, -1, 1, 5, 1, -3, 5, 3, 4, 0, 0}; {-2, -3, 2, -1, 3, 4, -3, 2, 5, 2, 0, 0}; {-4, -5, 0, -2, -4, -3, 3, 6, 2, -5, 0, 0}; {0, 0, 6, 5, 8, 6, 6, 8, 1, 6, 11, 7}; {-5, 5, -3, 6, -4, 1, -3, 1, 4, 6, 0, 0}; {-4, 1, 0, 5, 1, 4, -2, 4, 4, 1, 0, 0}; {6, -3, 6, -3, 3, 6, -5, -1, -5, 4, 0, 0}; {4, 2, 6, 4, 6, 0, -4, 0, 3, 6, 0, 0}; {-4, 2, 2, -4, 6, -1, 4, -1, 0, 0, 0, 0}; {-4, 6, -2, -3, 1, -5, 0, 3, 6, 3, 0, 0}; {0, 0, 6, 7, 5, 5, 0, 4, 6, 3, 10, 4}; {-4, -1, -4, 1, -3, 2, 3, -3, 4, 3, 0, 0}; {4, -5, 4, -3, 2, 4, -2, -4, 4, 0, 0, 0}; {-2, 4, 4, 1, -2, 3, 4, -4, 1, -2, 0, 0}; {4, -5, 4, -2, -2, 3, -2, 1, 4, 3, 0, 0}; {0, 0, 6, 9, 6, 10, 5, 9, 8, 1, 11, 9}; {0, 0, 6, 9, 11, 3, 11, 3, 0, 1, 9, 4}; {0, 0, 6, 10, 2, 1, 4, 0, 8, 8, 11, 8}; {-2, -3, 2, 6, 1, -5, -3, 3, 1, -2, 0, 0 1; {6, 4, -3, 2, -2, 5, 5, -2, 0, 3, 0, 0}; {4,2,-5, 0, -3, 6, 0, 2, -4, 0, 0, 0}; {3, 0, 4, -2, 0, 6, 0, -3, -5, -3, 0, 0}; {0, 0, 7, 5, 0, 9, 2, 9, 3, 6, 4, 5}; {-3, 5, -4, 2, 2, -2, 2, -1, -4, -3, 0, 0}; {-2,-3, 3, 1, -4, -3, 4, -4, 2, -2, 0, 0}; {-1, 6, -4, 2, -5, 3, 0, -4, -3, -2, 0, 0}; {-3, 2, 2, 6, -1, -5,

3, 3, 0, 3, 0, 0}; {0, 0, 7, 6, 9, 3, 3, 1, 3, 5, 1, 5}; {-3, -5, 0, -2, 2, 4, -3, 2, 5, 2, 0, 0}; {1, -3, 0, -4, 1, -2, -4, 4, -5, -3, 0, 0}; {-3, 6, -2, -5, -4, 2, -2, 1, 4, 6, 0, 0}; {0, 0, 7, 8, 2, 1, 9, 4, 9, 7, 8, 10}; {0, 3, 1, 5, -2, 3, 4, -3, 5, 2, 0, 0}; {-2, 4, 5, 1, -2, 4, 4, -4, 1, -1, 0, 0}; {-5, 0, 0, -5, 4, -3, -5, -1, 3, 0, 0, 0}; {4, -1, 1, -2, 6, -3, -5, -1, -1, -5, 0, 0}; {-4, 0, -1, 6, 0, 1, -5, 3, 5, 1, 0, 0}; {0, 0, 7, 11, 5, 3, 6, 3, 0, 0, 4, 3}; {0, 0, -5, -1, 6, -4, 1, -3, 6, -1, 0, 0}; {0, 0, 7, 11, 10, 11, 4, 3, 7, 0, 8, 8}; {-4, 5, -2, 0, 6, -4, 5, 2, -3, 0, 0, 0}; {0, 4, 4, 2, 2, -3, -1, 4, -2, -5, 0, 0}; {0, 0, 8, 3, 3, 2, 4, 10, 2, 0, 8, 0}; {2, 1, -4, 2, 3, -3, 3, 6, 4, -2, 0, 0}; {4, 2, -4, 2, 5, 1, 6, 5, 5, 6, 0, 0}; {1, -3, 1, 6, 6, -3, 1, 0, -2, 3, 0, 0}; {2, -1, 4, -1, 6, 5, 1, 2, -4, -1, 0, 0}; {4, 2, -4, -4, 1, 5, -4, 4, 6, 0, 0, 0}; {1, -3, 1, -4, 0, -3, -3, 0, 6, 6, 0, 0}; {-3, 5, -3, 4, -2, -4, 6, 4, -5, -4, 0, 0}; {-2, -5, 0, -4, 6, 5, -4, -1, 5, -3, 0, 0}; {0, 0, 8, 8, 0, 10, 8, 2, 7, 2, 9, 0}; {3, -3, -1, 5, 5, 1, 5, 1, -3, -1, 0, 0}; {-4, -5, 2, 1, 6, -3, 3, -3, 1, -1, 0, 0}; {0, 0, 8, 8, 2, 8, 3, 10, 2, 0, 2, 4}; {6, -2, -2, 2, 3, -2, 3, -3, 3, 2, 0, 0}; {-5, 6, 1, 0, 2, -1, 4, -1, 2, -5, 0, 0}; {-2, 1, 0, 3, -3, -1, 5, -2, -5, 4, 0, 0}; {-3, 1, 1, 6, 3, -1, 4, 6, 3, 2, 0, 0}; {6, -1, 0, 6, 5, -4, 2, -3, 1, 0, 0, 0}; {-3, 3, 5, 0, -4, 1, -2, -4, -3, -4, 0, 0}; {-4, 0, 0, 6, 0, -5, -2, -4, -4, 5, 0, 0}; {0, 0, 8, 10, 0, 7, 2, 0, 4, 8, 6, 9}; {4, 1, 6, 5, -3, 5, -2, 2, 5, 2, 0, 0}; {0, 0, 8, 11, 9, 4, 11, 2, 6, 5, 5, 10}; {0, 0, 9, 0, 5, 10, 10, 10, 3, 11, 5, 3}; {-4, 6, 1, 2, -4, 4, -3, -1, 2, -1, 0, 0}; {-1, 5, -4, 6, 1, 6, 4, -4, -3, 3, 0, 0}; {0, 0, 9, 2, 3, 1, 9, 1, 10, 5, 6, 9}; {3, 3, 0, 5, -5, 4, -3, 2, 1, 6, 0, 0}; {-5, 2, 6, -5, -4, -2, 4, -3, 5, 3, 0, 0}; {0, 0, 9, 3, 10, 3, 4, 1, 4, 9, 10, 1}; {-5, 4, -2, 2, -3, -1, 3, 3, -1, -2, 0, 0}; {-2, -3, 5, -1, -2, 3, -4, 3, -5, 0, 0, 0}; {6, 5, 1, -5, -5, 0, 5, 1, 6, -1, 0, 0}; {5, 4, 0, -5, 3, -4, 2, 5, -4, 0, 0, 0}; {-1, 6, -2, 1, -3, -2, -5, 4, -5, -5, 0, 0}; {0, 0, 9, 5, 10, 0, 5, 1, 6, 6, 8, 4}; {3, -2, 2, 5, 5, 5, 6, 1, 6, 4, 0, 0}; {0, 0, 9, 5, 11, 11, 0, 4, 8, 3, 6, 7}; {-4, 3, -5, -1, -5, -4, 6, 4, -5, -5, 0, 0}; {3, -5, -4, -3, 3, -2, -5, 5, 0, 3, 0, 0}; {0, -5, -1, 4, 4, 0, 3, 1, -3, -3, 0, 0}; {0, 5, -5, -2, -1, -3, -4, 3, -3, 3, 0, 0}; {0, 0, 9, 8, 2, 5, 0, 6, 7, 11, 9, 2}; {-2, -2, -5, 6, 0, 5, -1, 4, -3, -3, 0, 0}; {2, -2, 3, -2, 4, 5, 2, 2, 5, 5, 0, 0}; {3, -3, 0, 6, 5, 1, 4, 1, -3, -2, 0, 0}; {2,-2, 3, -1, 6, 5, 1, 2, -4, -1, 0, 0}; {-5,-1, 0, 4, -2, 5, 2, 2, -2, 2, 0, 0}; {4, -5, -5, -1, 4, -1, 2, 0, -2, 5, 0, 0}; {1, 3, 2, 6, 0, -5, -1, -1, 5, 3, 0, 0}; {-5, 2, 6, 3, 4, 6, -1, 0, -3, 6, 0, 0}; {6, -3, -2, 3, -3, 4, -3, -2, 6, 2, 0, 0}; {-4, 0, 2, -3, 3, 0, 4, 6, 3, 1, 0, 0}; {0, 0, 10, 1, 8, 1, 4, 5, 10, 10, 4, 1}; {-4, 2, 6, 3, 4, 6, -1, 0, -3, 6, 0, 0}; {3, -2, 3, 2, -3, 2, 4, 5, -5, 1, 0, 0}; {0, 0, 10, 2, 3, 8, 9, 10, 6, 1, 7, 0}; {2, -4, 0, -2, 6, 6, 1, -4, -2, 0, 0, 0}; {-1, -1, -3, 1, -5, 4, 1, -1, 5, -3, 0, 0}; {1,-4, 1, 0, 2, -2, 2, 5, -5, 4, 0, 0}; {4, -1, 4, 4, -1, 0, -4, 5, -2, 0, 0, 0}; {4, 0, 6, -5, 4, -5, -1, 4, 3, -2, 0, 0}; {1, 6, -3, -4, 2, 6, 2, -1, -2, 2, 0, 0}; {3,-1, 5, -5, 6, -1, 2, 1, 0, 4, 0, 0}; {0, 5, -4, -4, 1, 6, 1, -2, -3, 2, 0, 0}; {0, 0, 10, 5, 5, 10, 3, 9, 10, 10, 2, 9}; {5, 3, -1, 4, 4, -1, 4, -5, 5, -2, 0, 0}; {3, 0, -5, 0, -5, -2, 1, 0, 3, 4, 0, 0}; {1, -1, -5, 2, -4, -3, -2, 4, -4, 0, 0, 0}; {0, 0, 10, 7, 3, 8, 3, 7, 6, 8, 11, 4}; {-3, 4, -3, 1, 5, 2, -1, 0, -2, -4, 0, 0}; {-3, 6, 1, -5, 1, 1, -1, 2, 5, -1, 0, 0}; {5, -3, -1, 1, -2, 5, 2, 3, 0, 4, 0, 0}; {-5, 4, -1, 6, -3, 6, 5, 3, -5, -2, 0, 0}; {1, 0, -3, -4, 1, 5, -2, 5, -2, -3, 0, 0}; {0, 0, 10, 11, 0, 2, 6, 10, 8, 3, 10, 3}; {-2, 4, -4, 3, -4, -5, -1, -1, 3, 3, 0, 0}; {-4, 2, -5, 2, -3, 6, 5, -2, 0, 2, 0, 0}; {-1, 6, 0, -4, -4, 2, 6, -4, -2, 1, 0, 0}; {0, 0, 11, 1, 3, 9, 8, 5, 1, 6, 0, 8}; {6, 1, -5, 4, 4, -1, 3, -5, -4, 0, 0, 0}; {-4, 2, -5, 3, 4, 6, 0, 0, -3, -5, 0, 0}; {0, 0, 11, 4, 1, 7, 8, 1, 3, 9, 0, 9}; {-1, 4, -4, -5, 1, 4, 2, -1, -3, 2, 0, 0}; {-1, 1, 2, -2, 2, -1, 3, -3, 6, 5, 0, 0}; {0, 0, 11, 6, 1, 0, 4, 7, 10, 5, 8, 4}; {-5, 2, -4, -2, 1, 3, -3, 5, 1, 1, 0, 0}; {-5, 3, -2, 1, -4, -1, 3, 3, -1, -2, 0, 0}; {-4, 4, -1, 3, -2, 1, 3, 2, 4, 5, 0, 0}; {3, -3, 2, 4, -3, 5, 3, 4, -1, -2, 0, 0}; {0, 0, 11, 7, 8, 4, 11, 10, 2, 2, 9, 2}; {5, 2, -2, 3, 1, 1, -4, -2, 5, -3, 0, 0}; {6, 3, -1, 5, -5, 3, 6, 5, 5, -2, 0, 0}; {1, -4, 2, 6, -4, 3, 1, 0, -2, -3, 0, 0}; {-5, 4, 0, -5, -5, 5, -5, 2, 5, -2, 0, 0}; {2, -1, -5, 2, 6, 3, 2, 2, -5, -2, 0, 0}; {0, 0, 11, 9, 4, 9, 3, 9, 3, 4, 8, 8}; {5, 1, -4, 2, -4, -1, 1, 0, 3, 4, 0, 0}; {6, 0, 5, -3, 5, 5, 5, 3, -3, -4, 0, 0}; {-5, 1, 6, 0, -4, 5, 5, -3, 0, 1, 0, 0}; {2, -2, 5, 1, 2, -3, 1, 6, -4, -1, 0, 0}; and {1, -4, 2, -3, -1, -2, -3, 0, 5, 6, 0, 0}; and
{0, 0, 0, 0, 3, 6, 0, 10, 6, 3, 8, 1}; {0, 0, 1, 3, 3, 9, 6, 2, 4, 11, 2, 9}; {0, 0, 3, 0, 9, 4, 3, 3, 9, 1, 8, 0}; {0, 0, 3, 1, 10, 11, 8, 2, 6, 1, 2, 7}; {0, 0, 3, 1, 11, 6, 7, 1, 4, 11, 7, 11}; {0, 0, 3, 6, 10, 8, 8, 3, 11, 9, 0, 8}; {0, 0, 3, 7, 1, 4, 7, 6, 4, 0, 5, 2}; {0, 0, 4, 8, 8, 3, 9, 0, 7, 1, 10, 10}; {0, 0, 6, 5, 3, 5, 1, 5, 1, 8, 1, 2}; {0, 0, 6, 6, 1, 3, 4, 4, 5, 0, 6, 0}; {0, 0, 6, 8, 1, 3, 1, 4, 9, 5, 11, 8}; {0, 0, 7, 8, 8, 6, 2, 9, 6, 10, 3, 9}; {0, 0, 7, 8, 10, 9, 11, 2, 9, 1, 8, 4}; {0, 0, 8, 4, 4, 9, 3, 0, 5, 11, 2, 2}; {0, 0, 8, 5, 7, 10, 2, 10, 0, 11, 4, 11}; {0, 0, 8, 6, 9, 3, 11, 3, 4, 0, 4, 5}; {0, 0, 9, 1, 3, 9, 9, 9, 3, 0, 5, 0}; {0, 0, 10, 0, 7, 11, 7, 4, 11, 11, 2, 5}; {0, 0, 10, 11, 2, 7, 8, 2, 10, 2, 8, 4}; and {0, 0, 11, 6, 5, 0, 8, 1, 0, 4, 10, 1}; and

the processing unit is further configured to process the first signal based on the N elements in the sequence {$f_n$}.

8. The signal processing apparatus according to claim 7, wherein the transceiver unit is further configured to:

obtaining the first signal on the N subcarriers on N consecutive subcarriers; or
obtaining the first signal on the N subcarriers on N equally spaced subcarriers.

9. The signal processing method according to any one of claims 1 to 4 or the signal processing apparatus according to any one of claims 5 to 8, wherein the first signal is a reference signal, or the first signal is a signal used to carry communication information.

10. The signal processing method according to any one of claims 1 to 4 and 9 or the signal processing apparatus according to any one of claims 5 to 9, wherein the set of sequences {$s_n$} consisting of an element $s_n$ comprises at least a first sequence in a second sequence set or an equivalent sequence of the first sequence, and a second sequence in the second sequence set or an equivalent sequence of the second sequence;

the second sequence set is one of the following sets: a sequence set 1, a sequence set 2, a sequence set 3, a sequence set 4, a sequence set 5, a sequence set 6, a sequence set 7, a sequence set 8, a sequence set 9, a sequence set 10, a sequence set 11, a sequence set 12, a sequence set 13, and a sequence set 14;
sequences in the sequence set 1 comprise some or all of the following sequences:
{6, 2, -3, -3, 3, -3, 1, 2, 4, 0, 0, 0}; {1, -4, 2, -3, -1, -2, -3, 0, 5, 6, 0, 0}; {5,-5, 0, 6, 3, -5, 5, -4, 6, 5, 0, 0}; {2, 1, 3, -4, 5, -2, 5, 0, 1, 5, 0, 0}; {-3, 2, 2, 6, -1, -5, 3, 3, 0, 3, 0, 0}; {-1,-3, 6, 0, 3, -1, 2, 3, 3, -4, 0, 0}; {-2, 2, 6, 6, -1, 5, 0, -1, -4, 1, 0, 0}; {-4, 4, 3, -2, 1, 5, -1, -4, -1, -2, 0, 0}; {-1, 2, -4, 2, -4, -4, -1, -2, 4, 2, 0, 0}; {3, -3, 0, 6, 5, 1, 4, 1, -3, -2, 0, 0}; {1, 4, -1, -3, -1, -4, 5, -2, -2, -5, 0, 0}; {-3, 5, -3, 4, -2, -4, 6, 4, -5, -4, 0, 0}; {-4, -5, 2, 1, 6, -3, 3, -3, 1, -1, 0, 0}; {4, -4, -3, 3, -3, 5, -4, -5, -5, 4, 0, 0}; {3, 6, -1, 5, 0, -2, 0, -2, -4, -5, 0, 0}; {5, 2, -2, 3, 1, 1, -4, -2, 5, -3, 0, 0}; {3, 0, -3, 3, -3, -1, -3, 5, -4, -1, 0, 0}; {3, 5, 0, 3, -4, 4, 2, -5, 5, -1, 0, 0}; {4, 2, -4, 4, 1, 5, -4, 4, 6, 0, 0, 0}; {2,-4, -5, 1, 1, -5, 2, 6, 1, 1, 0, 0}; {6, 1, 0, -2, 3, -5, -2, -3, 2, -2, 0, 0}; {-2, 1, 0, 3, -3, -1, 5, -2, -5, 4, 0, 0}; {-3, 1, -4, 3, 6, -2, -3, 5, 1, -1, 0, 0}; {2,-3, 4, -4, -5, 6, -1, -1, 3, 5, 0, 0}; {1, -4, 1, 0, 2, -2, 2, 5, -5, 4, 0, 0}; {-3, 1, -5, -2, -2, 3, -1, 6, 5, 1, 0, 0}; {5, 1, -4, 2, -4, -1, 1, 0, 3, 4, 0, 0}; {2, -4, 0, -2, 6, 6, 1, -4, -2, 0, 0, 0}; {-3, 6, -2, -5, -4, 2, -2, 1, 4, 6, 0, 0}; and {-1, 6, 2, -2, 3, -4, 0, 3, 3, 3, 0, 0};
sequences in the sequence set 2 comprise some or all of the following sequences:

{6, 2, -3, -3, 3, -3, 1, 2, 4, 0, 0, 0}; {6, 0, -5, 1, 0, 2, 0, 0, 5, 5, 0, 0}; {6, -3, 1, -5, -2, -5, 3, -4, 6, 1, 0, 0}; {-4, 2, 2, -4, 6, -1, 4, -1, 0, 0, 0, 0}; {-3, -5, -1, -5, 4, 3, -3, -1, 5, -2, 0, 0}; {-5, -2, 4, 4, -2, 3, 0, -2, -4, 0, 0, 0}; {-2, -3, 5, -1, -2, 3, -4, 3, -5, 0, 0, 0}; {4, 2, -4, 2, 5, 1, 6, 5, 5, 6, 0, 0}; {-2, -1, 1, -5, 3, 6, 2, 0, -1, 6, 0, 0}; {5,-4, 1, 6, 1, -1, 1, 0, 6, 3, 0, 0}; {-3, 5, 4, 3, -3, 2, 5, -5, 0, -3, 0, 0}; {0, 2, 5, -2, 5, 3, 3, -3, 4, 0, 0, 0}; {4,-1, 4, 4, -1, 0, -4, 5, -2, 0, 0, 0}; {6, 1, -5, 4, 4, -1, 3, -5, -4, 0, 0, 0}; {4, -1, 1, -2, 6, -3, -5, -1, -1, -5, 0, 0}; {3, -3, 2, 4, -3, 5, 3, 4, -1, -2, 0, 0}; {-3, 1, -1, 1, 5, 1, -3, 5, 3, 4, 0, 0}; {-5, 6, -3, -5, 3, -1, 2, -2, 3, 6, 0, 0}; {-3, 1, -3, 6, -4, 6, 5, -1, -5, -4, 0, 0}; {6, -2, -2, 2, 3, -2, 3, -3, 3, 2, 0, 0}; {-1, -5, 4, -4, 3, 5, 0, 6, -5, -1, 0, 0}; {-2, -3, 2, 6, 1, -5, -3, 3, 1, -2, 0, 0}; {-3, -5, 0, -2, 2, 4, -3, 2, 5, 2, 0, 0}; {4, -5, -5, -1, 4, -1, 2, 0, -2, 5, 0, 0}; {2, -1, -5, 2, 6, 3, 2, 2, -5, -2, 0, 0}; {3, 0, -5, 0, -5, -2, 1, 0, 3, 4, 0, 0}; {-1,4, 1, -5, -3, 3, 4, -1, 0, -2, 0, 0}; {-5, 5, -3, 6, -4, 1, -3, 1, 4, 6, 0, 0}; {-5, 4, -2, 2, -3, -1, 3, 3, -1, -2, 0, 0}; {0,4, 0, -4, 2, -2, -2, 6, -4, 0, 0, 0};

sequences in the sequence set 3 comprise some or all of the following sequences:

{6, 2, -3, -3, 3, -3, 1, 2, 4, 0, 0, 0}; {4, 5, 6, -2, 3, -1, 4, -1, -2, 4, 0, 0}; {2, -5, 3, -4, 3, 3, 6, -5, 4, 5, 0, 0}; {5, 1, 1, 6, -1, 2, -2, -5, -3, -3, 0, 0}; {0, 4, 4, 2, 2, -3, -1, 4, -2, -5, 0, 0}; {-5, 4, 0, -5, -5, 5, -5, 2, 5, -2, 0, 0}; {6, -4, 2, -4, -1, 4, 1, -5, 3, 0, 0, 0}; {-3, 5, -4, 2, 2, -2, 2, -1, -4, -3, 0, 0}; {-2, -3, 3, 1, -4, -3, 4, -4, 2, -2, 0, 0}; {3,-1,-3, 1, 2, 5, 3, -5, 1, 4, 0, 0}; {-1, 4, -4, -5, 1, 4, 2, -1, -3, 2, 0, 0}; {-3, 3, 5, 0, -4, 1, -2, -4, -3, -4, 0, 0}; {2, -4, 2, 1, 6, 4, -5, -1, 3, 1, 0, 0}; {3, -3, -4, -1, 3, -2, -5, -5, -1, 4, 0, 0}; {-5, 2, 6, 3, 4, 6, -1, 0, -3, 6, 0, 0}; {6, 6, -3, -5, 3, -2, 2, -4, 3, 5, 0, 0}; f 4, -5, 0, -5, -4, 0, 2, 1, 5, 1, 0, 0}; {3, -2, 2, 5, 5, 5, 6, 1, 6, 4, 0, 0}; {0, 1, 6, -1, 6, 3, 4, -1, -2, 2, 0, 0}; {-3, -5, -2, -4, 4, -4, 1, 6, -4, 6, 0, 0}; {-3, -1, 6, -2, 3, 1, 0, 5, 3, -2, 0, 0}; {3, -5, 3, -1, -5, 6, 2, 5, -2, 0, 0, 0}; {3, 6, 2, 5, -5, 2, -2, 5, 5, 5, 0, 0}; {-4, 5, -2, 0, 6, -4, 5, 2, -3, 0, 0, 0}; {1, 3, 2, 6, 0, -5, -1, -1, 5, 3, 0, 0}; {4, -5, 4, -2, -2, 3, -2, 1, 4, 3, 0, 0}; {-1, -1, -3, 1, -5, 4, 1, -1, 5, -3, 0, 0}; {-3, 4, -3, 1, 5, 2, -1, 0, -2, -4, 0, 0}; {-5, 4, 6, 4, -3, 0, -4, 2, 2, -4, 0, 0}; and {3, -1, 5, -5, 6, -1, 2, 1, 0, 4, 0, 0};

sequences in the sequence set 4 comprise some or all of the following sequences:

{0,-2, 4, 2, -4, -3, -4, -4, -4, 2, -5, -1}; {-2, -2, -5, 6, 0, 5, -1, 4, -3, -3, 0, 0}; {-1, 6, 0, -4, -4, 2, 6, -4, -2, 1, 0, 0}; {-2, 2, -2, 1, 5, -2, -2, 6, 4, -1, 0, 0}; {-4, 0, -1, 6, 0, 1, -5, 3, 5, 5, 1, 0, 0}; {6, 5, 1, -5, -5, 0, 5, 1, 6, -1, 0, 0}; {3, -4, 3, -4, 5, 5, 2, 2, -4, -3, 0, 0}; {5, -1, 6, 6, 5, 2, -5, 4, 6, -4, 0, 0}; {-4, 1, -5, 4, -4, -5, -4, -2, 5, 4, 0, 0}; {-1, 5, -4, 6, 1, 6, 4, -4, -3, 3, 0, 0}; {1, -5, 2, 1, 5, 0, 1, -3, -5, -4, 0, 0}; {-5, 2, 6, -5, -4, -2, 4, -3, 5, 3, 0, 0}; {0, 0, 1, 6, 3, -1, 4, 6, 1, 5, 0, 0}; {-4, -5, 0, -2, -4, -3, 3, 6, 2, -5, 0, 0}; {5, 1, 2, 6, 0, 2, -2, 6, -3, -4, 0, 0}; {3, -3, 2, 4, -3, 5, 3, 4, -1, -2, 0, 0}; {-4, -1, -5, 1, 0, 5, 0, 3, 5, 4, 0, 0}; {6, -3, -2, 3, -3, 4, -3, -2, 6, 2, 0, 0}; {-2, -3, 2, 6, 1, -5, -3, 3, 1, -2, 0, 0}; {-3, 6, 1, -5, 1, 1, -1, 2, 5, -1, 0, 0}; {6, 1, -3, 3, -4, 0, 4, 6, 6, 5, 0, 0}; {-5, 1, -4, -5, -1, 5, -5, -5, -4, 2, 0, 0}; {4, 2, 6, 4, 6, 0, -4, 0, 3, 6, 0, 0}; {-5, -1, 0, 4, -2, 5, 2, 2, -2, 2, 0, 0}; {6, 3, -1, 5, -5, 3, 6, 5, 5, -2, 0, 0}; {1, -1, -5, 2, -4, -3, -2, 4, -4, 0, 0, 0}; {-1, 0, 3, 1, 0, -5, -2, 5, 1, 6, 0, 0}; {-3, 0, 6, 5, 0, 2, -4, 4, -1, -1, 0, 0}; {-4, -1, -4, 1, -3, 2, 3, -3, 4, 3, 0, 0}; and {0, -4, -5, 1, -5, -2, 5, -4, -5, -1, 0, 0};

sequences in the sequence set 5 comprise some or all of the following sequences:

{0, 0, 8, 7, 6, 0, 6, 4, 9, 5, 7, 10}; {0, 0, 5, 2, 1, 2, 1, 9, 6, 10, 3, 8}; {0, 0, 1, 3, 11, 7, 11, 4, 5, 0, 0, 7}; {0, 0, 10, 5, 5, 10, 3, 9, 10, 10, 2, 9}; {0, 0, 3, 4, 11, 1, 7, 10, 5, 11, 6, 3}; {0, 0, 4, 8, 6, 2, 2, 11, 3, 4, 0, 5}; {0, 0, 2, 10, 4, 0, 11, 9, 6, 0, 3, 5}; {0, 0, 9, 2, 3, 1, 9, 1, 10, 5, 6, 9}; {0, 0, 7, 11, 5, 3, 6, 3, 0, 0, 4, 3}; {0, 0, 8, 8, 0, 10, 8, 2, 7, 2, 9, 0}; {0, 0, 4, 10, 2, 4, 7, 6, 10, 7, 5, 3}; {0, 0, 5, 2, 1, 5, 2, 5, 0, 10, 0, 7}; {0, 0, 3, 3, 7, 1, 5, 3, 1, 11, 7, 11}; {0, 0, 9, 5, 11, 11, 0, 4, 8, 3, 6, 7}; {0, 0, 2, 11, 10, 4, 6, 9, 3, 8, 2, 9}; {0, 0, 9, 0, 5, 10, 10, 10, 3, 11, 5, 3}; {0, 0, 9, 8, 2, 5, 0, 6, 7, 11, 9, 2}; {0, 0, 1, 10, 1, 8, 11, 3, 2, 8, 7, 2}; {0, 0, 1, 6, 11, 3, 10, 7, 4, 11, 2, 1}; {0, 0, 11, 7, 8, 4, 11, 10, 2, 2, 9, 2}; {0, 0, 4, 8, 10, 3, 11, 4, 2, 2, 11, 6}; {0, 0, 6, 7, 5, 5, 0, 4, 6, 3, 10, 4}; {0, 0, 2, 7, 6, 4, 11, 8, 5, 9, 4, 7}; {0, 0, 7, 11, 10, 11, 4, 3, 7, 0, 8, 8}; {0, 0, 1, 5, 9, 2, 10, 3, 0, 8, 4, 4}; {0, 0, 0, 1, 10, 8, 5, 0, 4, 9, 10, 2}; {0, 0, 9, 5, 10, 0, 5, 1, 6, 6, 8, 4}; {0, 0, 11, 4, 1, 7, 8, 1, 3, 9, 0, 9}; {0, 0, 1, 9, 0, 1, 6, 1, 8, 8, 5, 0}; and {0, 0, 8, 10, 0, 7, 2, 0, 4, 8, 6, 9};

sequences in the sequence set 6 comprise some or all of the following sequences:

{0, 0, 8, 4, 6, 1, 9, 1, 1, 8, 0, 0}; {0, 0, 1, 9, 2, 5, 4, 8, 5, 1, 0, 6}; {0, 0, 10, 1, 8, 1, 4, 5, 10, 10, 4, 1}; {0, 0, 3, 6, 5, 2, 7, 4, 3, 1, 7, 0}; {0, 0, 2, 11, 11, 5, 6, 2, 5, 10, 6, 1}; {0, 0, 3, 3, 11, 8, 5, 7, 3, 6, 11, 4}; {0, 0, 8, 11, 9, 4, 11, 2, 6, 5, 5, 10}; {0, 0, 11, 6, 1, 0, 4, 7, 10, 5, 8, 4}; {0, 0, 6, 10, 2, 1, 4, 0, 8, 8, 11, 8}; {0, 0, 10, 11, 0, 2, 6, 10, 8, 3, 10, 3}; {0, 0, 9, 3, 10, 3, 4, 1, 4, 9, 10, 1}; {0, 0, 7, 5, 0, 9, 2, 9, 3, 6, 4, 5}; {0, 0, 0, 4, 8, 11, 9, 6, 10, 5, 0, 11}; {0, 0, 11, 9, 4, 9, 3, 9, 3, 4, 8, 8}; {0, 0, 8, 3, 3, 2, 4, 10, 2, 0, 8, 0}; {0, 0, 3, 8, 2, 2, 9, 7, 6, 2, 6, 3}; {0, 0, 4, 11, 11, 0, 11, 9, 3, 5, 2, 8}; {0, 0, 6, 5, 8, 6, 6, 8, 1, 6, 11, 7}; {0, 0, 6, 9, 6, 10, 5, 9, 8, 1, 11, 9}; {0, 0, 11, 1, 3, 9, 8, 5, 1, 6, 0, 8}; {0, 0, 7, 8, 2, 1, 9, 4, 9, 7, 8, 10}; {0, 0, 2, 0, 8, 9, 6, 10, 3, 9, 9, 2}; {0, 0, 4, 0, 6, 1, 9, 7, 6, 2, 5, 8}; {0, 0, 10, 7, 3, 8, 3, 7, 6, 8, 11, 4};

{0, 0, 10, 2, 3, 8, 9, 10, 6, 1, 7, 0}; {0, 0, 7, 6, 9, 3, 3, 1, 3, 5, 1, 5}; {0, 0, 4, 1, 8, 3, 5, 3, 2, 9, 11, 4}; {0, 0, 6, 9, 11, 3, 11, 3, 0, 1, 9, 4}; {0, 0, 3, 8, 10, 7, 4, 3, 8, 4, 8, 6}; and {0, 0, 8, 8, 2, 8, 3, 10, 2, 0, 2, 4};

sequences in the sequence set 7 comprise some or all of the following sequences:

{0, 4, -4, -2, 4, 3, 0, -4, -2, -4, -1, -3}; {-4, -1, 0, 5, -1, 6, -2, -2, -5, 3, 0, 0}; {-5, 5, -1, 1, -2, 3, -4, 1, 1, -3, 0, 0}; {-4, 2, -5, 3, 4, 6, 0, 0, -3, -5, 0, 0}; {-1, 5, 0, -5, 3, 2, 2, -5, -2, 1, 0, 0}; {-5, 0, -5, 1, 3, -4, -4, 2, 1, 0, 0, 0}; {1, -3, 0, -4, 1, -2, -4, 4, -5, -3, 0, 0}; {-1,-3, 6, 0, 3, -1, 2, 3, 3, -4, 0, 0}; {1, 3, -3, 4, 6, -3, 2, 0, 5, 1, 0, 0}; {-2, 2, 6, 6, -1, 5, 0, -1, -4, 1, 0, 0}; {2, -4, 3, -5, -5, 5, -2, 0, 4, 4, 0, 0}; {3, 3, 0, 1, -5, 0, 6, 2, -4, -4, 0, 0}; {5, 3, -1, 4, 4, -1, 4, -5, 5, -2, 0, 0}; {3, 3, -5, -5, 1, -3, 3, -4, 2, 3, 0, 0}; {-2, 4, 5, 1, -2, 4, 4, -4, 1, -1, 0, 0}; {5, 1, 0, 5, -2, 2, -3, 6, -2, 0, 0, 0}; {-5, -1, 6, 0, 6, 6, -4, -4, 6, 5, 0, 0}; {3, 2, 4, -3, 6, -1, 5, 0, 1, 5, 0, 0}; {-5, 1, -5, 6, -1, 5, -5, 6, -5, 1, 0, 0}; {2, -1, 4, -1, 6, 5, 1, 2, -4, -1, 0, 0}; {3, -3, 0, 6, 5, 1, 5, 2, -3, -2, 0, 0}; {2, -4, -5, -1, 2, -4, -4, 4, -1, 1, 0, 0}; {-1, 3, -5, 1, -4, -3, -3, 4, 1, -2, 0, 0}; {-4, 1, 0, 5, 1, 4, -2, 4, 4, 1, 0, 0}; {-5, -2, 4, -5, -1, -5, 4, -4, 6, 0, 0, 0}; {-2, 4, -4, 3, -4, -5, -1, -1, 3, 3, 0, 0}; {1,-3, 1, -4, 0, -3, -3, 0, 6, 6, 0, 0}; {2, -2, 5, 1, 2, -3, 1, 6, -4, -1, 0, 0}; {1, -5, 1, -3, -5, -1, -1, 6, -5, 1, 0, 0}; and {4, 6, -4, 4, -3, 6, 0, 6, 6, 3, 0, 0};

sequences in the sequence set 8 comprise some or all of the following sequences:

{0, -3, -5, 2, -3, 1, -2, -1, -1, 2, 6, -4}; {-5, 3, 5, 0, 5, 1, -1, 6, -4, -2, 0, 0}; {0,-2, 6, 0, -1, 3, -4, 3, -5, 0, 0, 0}; {-3, 0, 5, 0, -5, -3, -5, 3, 0, -2, 0, 0}; {-2, 4, 4, 1, -2, 3, 4, -4, 1, -2, 0, 0}; {-3,0, 5, 2, -5, 3, -1, -2, 2, 2, 0, 0}; {5,-3,-1, 1, -2, 5, 2, 3, 0, 4, 0, 0}; {1, 6, 0, -5, 4, -2, 0, 3, 3, 3, 0, 0}; {5, 0, 0, 5, -4, 3, 5, 1, -3, 0, 0, 0}; {0, 5, -4, -4, 1, 6, 1, -2, -3, 2, 0, 0}; {-3, -3, 5, -2, -1, -5, 1, 5, 3, -3, 0, 0}; {1, 6, 2, -4, -2, 0, -2, -1, 4, 3, 0, 0}; {-1, -4, 0, -4, -1, -1, 3, -5, -4, 4, 0, 0}; {3, 1, -4, -2, -4, 1, 6, -1, 0, -4, 0, 0}; {6, 0, 5, -3, 5, 5, 5, 3, -3, -4, 0, 0}; {-4, -1, 2, -4, 6, -2, -4, -5, -4, 3, 0, 0}; {6, 6, -2, -3, 4, -2, 5, -3, 3, 3, 0, 0}; {-3, 1, 1, 6, 3, -1, 4, 6, 3, 2, 0, 0}; {-5, 4, -1, 6, -3, 6, 5, 3, -5, -2, 0, 0}; {-4, 2, 6, 3, 4, 6, -1, 0, -3, 6, 0, 0}; {4,-2, 6, -3, -4, 6, 1, 0, 3, 6, 0, 0}; {-2, -5, 5, -4, 4, 6, 1, 6, -4, -4, 0, 0}; {4,-5, 4, -3, 2, 4, -2, -4, 4, 0, 0, 0}; {-4, -5, 0, -2, -4, -3, 3, 6, 2, -5, 0, 0}; {-4, 4, -1, 3, -2, 1, 3, 2, 4, 5, 0, 0}; {6,-1, 0, 6, 5, -4, 2, -3, 1, 0, 0, 0}; {-4, 2, -5, 2, -3, 6, 5, -2, 0, 2, 0, 0}; {0, 3, 1, 5, -2, 3, 4, -3, 5, 2, 0, 0}; {-5, 4, 5, -1, 6, -5, 1, 5, 5, -2, 0, 0}; and {0, -1,3,5,4,-1,4,5,0,4,0,0};

sequences in the sequence set 9 comprise some or all of the following sequences:

{0, 4, 0, -2, 1, -2, -4, 1, 2, 0, 5, -5}; {1, 4, -1, 4, -3, -3, 0, -2, 6, 2, 0, 0}; {0, -5, -1, 4, 4, 0, 3, 1, -3,

-3, 0, 0}; {1, 6, -3, -4, 2, 6, 2, -1, -2, 2, 0, 0}; {5, 3, 1, 5, 1, 3, -2, 5, 6, -3, 0, 0}; {2,-2, 3, -2, 4, 5, 2, 2, 5, 5, 0, 0}; {4,-5, 0, 4, 2, 6, 3, -4, 6, 4, 0, 0}; {3,-2, 5, -2, 0, -2, -3, 3, 3, -2, 0, 0}; {-1, 6, 3, 1, 6, -1, -2, 0, -5, -1, 0, 0}; {-1, 2, -4, 2, -4, 6, 1, 2, -2, -2, 0, 0}; {-5, 3, 2, 5, 3, 0, 4, -3, 5, -4, 0, 0}; {1, 0, -3, -4, 1, 5, -2, 5, -2, -3, 0, 0}; {-4, 0, 0, 6, 0, -5, -2, -4, -4, 5, 0, 0}; {6, 4, -3, 2, -2, 5, 5, -2, 0, 3, 0, 0}; {-4, 6, -2, -3, 1, -5, 0, 3, 6, 3, 0, 0}; {-4, 2, 1, -4, -2, 3, -3, 6, -2, 0, 0, 0}; {4,-2, 6, -3, -4, 6, 1, 0, 3, 6, 0, 0}; {6, -3, 6, -3, 3, 6, -5, -1, -5, 4, 0, 0}; {-5, 6, -3, -5, 3, -1, 2, -2, 3, 6, 0, 0}; {4, 0, 6, -5, 4, -5, -1, 4, 3, -2, 0, 0}; {-5, 2, 6, -5, -4, -2, 4, -3, 5, 3, 0, 0}; {-3, 1, 5, 0, -5, -3, -4, 3, 0, -2, 0, 0}; {0, 5, -5, -2, -1, -3, -4, 3, -3, 3, 0, 0}; {6, 3, 4, 0, 6, 4, -2, 4, 6, -2, 0, 0}; {-5, -4, 6, 3, 6, -1, 5, 5, -2, -5, 0, 0}; {-3, 2, -5, 0, -1, -3, -5, 5, -3, -4, 0, 0}; {4, 2, -5, 0, -3, 6, 0, 2, -4, 0, 0, 0}; {-1, 6, 5, 4, -2, 1, -2, 0, 1, -4, 0, 0}; {-4, 0, 5, 2, -3, -4, 4, -2, 1, 1, 0, 0}; and {-5, 6, 1, 0, 2, -1, 4, -1, 2, -5, 0, 0};

sequences in the sequence set 10 comprise some or all of the following sequences:

{6, 0, 6, 0, 4, -5, -4, 2, 0, -2, 0, 0}; {2, -4, 3, -5, -5, 5, -1, 0, 3, 4, 0, 0}; {-4, 0, 4, 3, -2, 3, -1, -2, -5, 0, 0, 0}; {0, 4, -2, 4, -3, -4, -1, -2, 6, 5, 0, 0}; {3, 0, 4, -2, 0, 6, 0, -3, -5, -3, 0, 0}; {-1, 0, 3, 4, -1, -5, 2, -5, 2, 3, 0, 0}; {-1,-1, 1, -4, 6, -3, 3, -2, -1, 5, 0, 0}; {-1, 6, -4, 2, -5, 3, 0, -4, -3, -2, 0, 0}; {6, 3, -1, 5, -1, 0, -1, 6, -3, 0, 0, 0}; {3, -2, 3, 2, -3, 2, 4, 5, -5, 1, 0, 0}; {-5, 0, 0, -5, 4, -3, -5, -1, 3, 0, 0, 0}; {3,-3, 5, 2, 2, -3, 1, -5, -3, -1, 0, 0}; {-2, -3, 2, -1, 3, 4, -3, 2, 5, 2, 0, 0}; {-2, 3, -4, 4, 5, 6, 1, 1, -3, -5, 0, 0}; {2, 1, -4, 2, 3, -3, 3, 6, 4, -2, 0, 0}; {-4, 0, 2, -3, 3, 0, 4, 6, 3, 1, 0, 0}; {0, 3, 1, 5, -2, 3, 4, -3, 5, 2, 0, 0}; {1, -2, -5, 0, 5, 0, 3, 2, 4, 6, 0, 0}; {-5, 3, -2, 1, -4, -1, 3, 3, -1, -2, 0, 0}; {-4, 3, -5, -1, -5, -4, 6, 4, -5, -5, 0, 0}; {-4, -1, 2, -4, 6, -2, -4, -5, -4, 3, 0, 0}; {2, -4, -4, -1, 2, -3, -4, 4, -1, 2, 0, 0}; {-1,-1, 4, -5, -4, 3, -2, 1, -3, 2, 0, 0}; {4, 0, -4, 2, 1, 4, -4, 3, 5, 0, 0, 0}; {4, -5, 4, -3, 2, 4, -2, -4, 4, 0, 0, 0}; {-2, -5, 0, -4, 6, 5, -4, -1, 5, -3, 0, 0}; {0, -4, -3, 4, -2, -5, 1, 6, -5, -1, 0, 0}; {-5, -1, -5, -2, 4, -1, -4, 4, 5, 6, 0, 0}; {-4, 3, -1, 0, 6, 6, -1, 3, -1, -1, 0, 0};and {-1, 1, 2, -2, 2, -1, 3, -3, 6, 5, 0, 0};

sequences in the sequence set 11 comprise some or all of the following sequences:

{6, 0, 6, 0, 4, -5, -4, 2, 0, -2, 0, 0}; {-2, 1, -4, -4, 4, -4, 3, -1, -4, -2, 0, 0}; {5, 2, 4, -1, 5, 6, 1, 5, 5, -3, 0, 0}; {3, 3, 0, 5, -5, 4, -3, 2, 1, 6, 0, 0}; {-5, 1, 6, 0, -4, 5, 5, -3, 0, 1, 0, 0}; {-1, 4, 2, -3, -4, 0, 6, -2, 2, 0, 0, 0}; {-4, 6, 1, 2, -4, 4, -3, -1, 2, -1, 0, 0}; {3, 6, -1, -2, 3, -5, 3, 1, -2, 2, 0, 0}; f 0, 0, 1, 6, 3, -1, 4, 6, 1, 5, 0, 0}; {5, -1, 5, -2, 0, 0, -1, 0, -4, 6, 0, 0}; {-4, 1, 6, 1, -2, 6, 0, 2, 4, 3, 0, 0}; {-5, -5, -5, 2, 6, -2, 6, 4, -3, 6, 0, 0}; {1, -3, 1, 6, 6, -3, 1, 0, -2, 3, 0, 0}; {0, -3, -1, -5, 2, -3, -4, 3,

-5, -2, 0, 0}; {-5, 2, -4, -2, 1, 3, -3, 5, 1, 1, 0, 0}; {0, 3, 1, 5, -2, 3, 4, -3, 5, 2, 0, 0}; {-1, 6, -2, 1, -3, -2, -5, 4, -5, -5, 0, 0}; {2, -2, -3, -5, 0, 5, -4, -4, 1, -3, 0, 0}; {1, -4, 2, 6, -4, 3, 1, 0, -2, -3, 0, 0}; {2, 4, -5, 1, 5, 0, -5, 5, 3, -1, 0, 0}; {-3, -1, 6, -3, 1, 0, 4, 2, -5, 3, 0, 0}; {3, -5, -4, -3, 3, -2, -5, 5, 0, 3, 0, 0}; {5, 4, 0, -5, 3, -4, 2, 5, -4, 0, 0, 0}; {-1, 0, 6, -3, 6, -2, 6, -1, -4, 6, 0, 0}; {3, -3, -1, 5, 5, 1, 5, 1, -3, -1, 0, 0}; {4, 1, 6, 5, -3, 5, -2, 2, 5, 2, 0, 0}; {0, 0, -5, -1, 6, -4, 1, -3, 6, -1, 0, 0}; {-2, -4, 6, 0, 5, -3, -5, 3, -4, -1, 0, 0}; {2,-2, 3, -1, 6, 5, 1, 2, -4, -1, 0, 0}; and {-3, 1, -3, 6, -4, 6, 5, -1, -5, -4, 0, 0};

sequences in the sequence set 12 comprise some or all of the following sequences:
{0, 0, 11, 6, 7, 7, 10, 4, 9, 9, 3, 10}; {0, 0, 7, 4, 9, 6, 3, 3, 4, 9, 3, 6}; {0, 0, 2, 5, 1, 2, 10, 10, 6, 1, 7, 4}; {0, 0, 1, 3, 3, 9, 6, 2, 4, 11, 2, 9}; {0, 0, 10, 0, 7, 11, 7, 4, 11, 11, 2, 5}; {0, 0, 7, 8, 10, 9, 11, 2, 9, 1, 8, 4}; {0, 0, 11, 8, 9, 3, 9, 0, 9, 2, 1, 6}; {0, 0, 11, 4, 1, 0, 7, 1, 6, 6, 10, 2}; {0, 0, 4, 8, 8, 3, 9, 0, 7, 1, 10, 10}; {0, 0, 10, 11, 2, 7, 8, 2, 10, 2, 8, 4}; {0, 0, 3, 1, 11, 6, 7, 1, 4, 11, 7, 11}; {0, 0, 6, 6, 1, 3, 4, 4, 5, 0, 6, 0}; {0, 0, 8, 4, 4, 9, 3, 0, 5, 11, 2, 2}; {0, 0, 5, 4, 2, 0, 2, 0, 7, 1, 6, 9}; {0, 0, 1, 4, 7, 3, 1, 3, 9, 3, 0, 9}; {0, 0, 8, 6, 9, 3, 11, 3, 4, 0, 4, 5}; {0, 0, 0, 0, 3, 6, 0, 10, 6, 3, 8, 1}; {0, 0, 3, 1, 10, 11, 8, 2, 6, 1, 2, 7}; {0, 0, 3, 7, 1, 4, 7, 6, 4, 0, 5, 2}; {0, 0, 8, 5, 7, 10, 2, 10, 0, 11, 4, 11}; {0, 0, 3, 6, 10, 8, 8, 3, 11, 9, 0, 8}; {0, 0, 3, 0, 9, 4, 3, 3, 9, 1, 8, 0}; {0, 0, 2, 5, 3, 1, 5, 0, 0, 9, 3, 8}; {0, 0, 6, 5, 3, 5, 1, 5, 1, 8, 1, 2}; {0, 0, 11, 6, 5, 0, 8, 1, 0, 4, 10, 1}; {0, 0, 7, 7, 11, 8, 7, 1, 7, 0, 9, 0}; {0, 0, 11, 9, 4, 4, 6, 9, 5, 11, 4, 7}; {0, 0, 9, 1, 3, 9, 9, 9, 3, 0, 5, 0}; {0, 0, 6, 8, 1, 3, 1, 4, 9, 5, 11, 8}; and {0, 0, 7, 8, 8, 6, 2, 9, 6, 10, 3, 9};

sequences in the sequence set 13 comprise some or all of the following sequences:
{0, 0, 0, 5, 3, 2, 11, 4, 10, 10, 3, 8}; {0, 0, 8, 7, 6, 8, 11, 2, 8, 3, 11, 4}; {0, 0, 11, 8, 5, 9, 11, 9, 3, 9, 0, 3}; {0, 0, 3, 5, 8, 4, 2, 11, 4, 0, 3, 11}; {0, 0, 4, 7, 7, 1, 7, 10, 5, 10, 8, 7}; {0, 0, 4, 0, 1, 6, 11, 4, 2, 4, 11, 9}; {0, 0, 0, 3, 6, 1, 0, 1, 7, 1, 9, 6}; {0, 0, 2, 3, 10, 7, 11, 7, 6, 0, 3, 9}; {0, 0, 9, 10, 4, 9, 3, 11, 5, 5, 9, 9}; {0, 0, 0, 3, 9, 10, 8, 2, 6, 2, 11, 6}; {0, 0, 4, 1, 11, 7, 8, 1, 5, 0, 8, 111}; {0, 0, 1, 0, 4, 0, 8, 8, 3, 3, 8, 0}; {0, 0, 7, 6, 7, 7, 4, 10, 8, 1, 6, 11}; {0, 0, 2, 7, 1, 3, 10, 10, 6, 2, 7, 5}; {0, 0, 11, 7, 0, 10, 3, 6, 8, 3, 9, 11}; {0, 0, 7, 8, 11, 10, 11, 2, 8, 2, 8, 4}; {0, 0, 1, 0, 7, 11, 11, 7, 4, 0, 3, 8}; {0, 0, 11, 5, 6, 1, 1, 5, 3, 11, 5, 11}; {0, 0, 11, 3, 0, 4, 0, 8, 8, 1, 4, 8}; {0, 0, 0, 7, 8, 8, 0, 7, 0, 0, 7, 1}; {0, 0, 7, 7, 4, 6, 7, 6, 11, 7, 2, 7}; {0, 0, 1, 0, 5, 10, 4, 8, 7, 2, 1, 8}; {0, 0, 11, 8, 6, 1, 9, 2, 1, 5, 10, 2}; {0, 0, 5, 5, 1, 3, 8, 0, 7, 2, 7, 5}; {0, 0, 0, 10, 6, 8, 2, 1, 6, 6, 1, 7}; {0, 0, 2, 6, 4, 5, 1, 3, 9, 3, 1, 8}; {0, 0, 10, 8, 6, 1, 6, 9, 4, 9, 8, 0}; {0, 0, 2, 5, 9, 7, 6, 3, 6, 1, 8, 5}; {0, 0, 0, 11, 8, 0, 5, 0, 2, 7, 6, 0}; and {0, 0, 4, 3, 11, 9, 8, 10, 7, 2, 7, 0}; and

sequences in the sequence set 14 comprise some or all of sequences in a union set of the sequences in the first sequence set and the following sequences:
{0, 0, 8, 7, 6, 0, 6, 4, 9, 5, 7, 10}; {0, 5, 6, 0, 7, 0, 11, 1, 4, 2, 0, 0}; {0, 7, 2, 0, 9, 10, 7, 10, 1, 2, 5, 10}; {0, 2, 0, 1, 0, 4, 7, 9, 3, 2, 11, 6}; {0, 10, 8, 5, 6, 0, 4, 6, 5, 9, 6, 11}; {0, 4, 4, 4, 10, 9, 9, 5, 9, 8, 4, 8}; {0, 9, 8, 1, 11, 11, 1, 6, 10, 7, 1, 5}; {0, 1, 3, 2, 11, 11, 5, 6, 0, 6, 0, 9}; {0, 7, 3, 1, 7, 8, 10, 3, 0, 2, 11, 1}; {0, 11, 1, 2, 3, 10, 8, 3, 8, 2, 4, 0}; {0, 10, 1, 10, 3, 10, 8, 7, 1, 3, 8, 11}; {0, 3, 10, 7, 5, 1, 5, 10, 1, 1, 3, 1}; {0, 3, 9, 11, 9, 7, 5, 10, 8, 0, 10, 1}; {0, 1, 3, 5, 2, 1, 2, 9, 2, 9, 9, 4}; {0, 7, 2, 2, 7, 2, 5, 5, 8, 2, 2, 1}; {0, 9, 0, 7, 9, 8, 0, 3, 4, 0, 6, 5}; {0, 7, 2, 6, 4, 1, 9, 10, 5, 7, 8, 9}; {0, 5, 11, 10, 1, 8, 7, 6, 0, 11, 10, 2}; {0, 11, 1, 3, 2, 1, 8, 10, 3, 8, 5, 0}; {0, 5, 11, 3, 2, 8, 3, 4, 6, 5, 1, 0}; {0, 6, 8, 0, 8, 7, 0, 10, 0, 7, 5, 7}; {0, 3, 1, 6, 4, 8, 5, 3, 2, 8, 0, 3}; {0, 1, 0, 9, 6, 1, 3, 9, 3, 9, 9, 0}; {0, 3, 0, 2, 7, 11, 11, 2, 10, 6, 3, 3}; {0, 5, 8, 8, 9, 7, 9, 4, 1, 10, 6, 10}; {0, 6, 7, 6, 0, 1, 10, 1, 1, 9, 1, 11}; {0, 10, 6, 6, 2, 4, 5, 11, 4, 1, 4, 5}; {0, 6, 4, 2, 9, 10, 9, 11, 7, 9, 10, 3}; {0, 9, 2, 2, 1, 9, 10, 0, 4, 5, 0, 5}; {0, 3, 11, 8, 3, 4, 9, 11, 0, 11, 1, 8}; {0, 5, 10, 3, 7, 4, 2, 3, 11, 9, 2, 1}; {0, 11, 8, 0, 9, 7, 11, 1, 0, 5, 8, 3}; {0, 4, 9, 2, 1, 5, 4, 8, 6, 4, 2, 1}; {0, 1, 10, 9, 11, 11, 4, 2, 9, 4, 7, 1}; {0, 1, 0, 11, 1, 6, 6, 0, 0, 7, 2, 8}; {0, 6, 1, 9, 3, 4, 10, 11, 6, 6, 5, 7}; {0, 3, 11, 2, 7, 9, 9, 11, 8, 4, 0, 10}; {0, 8, 4, 10, 7, 11, 1, 0, 5, 7, 3, 4}; {0, 1, 5, 6, 5, 5, 2, 5, 11, 5, 2, 9}; {0, 9, 6, 7, 2, 10, 3, 5, 8, 5, 6, 8}; {0, 11, 0, 11, 9, 1, 5, 5, 10, 0, 7, 2}; {0, 0, 0, 7, 8, 9, 1, 7, 0, 0, 8, 2}; {0, 0, 9, 10, 0, 5, 4, 11, 7, 11, 4, 11}; {0, 1, 5, 2, 7, 6, 0, 6, 8, 6, 3, 4}; {0, 7, 4, 9, 2, 3, 10, 8, 9, 11, 10, 10}; {0, 8, 10, 5, 10, 6, 4, 11, 1, 3, 5, 5}; {0, 0, 10, 4, 4, 2, 4, 9, 1, 0, 5, 11}; {0, 7, 11, 2, 11, 10, 10, 4, 3, 6, 5, 11}; {0, 10, 11, 1, 9, 3, 8, 7, 1, 3, 9, 8}; {0, 8, 3, 5, 10, 10, 1, 5, 2, 2, 4, 1}; {0, 4, 0, 10, 1, 10, 8, 1, 2, 0, 5, 7}; {0, 7, 4, 2, 11, 1, 6, 9, 9, 0, 9, 0}; {0, 1, 9, 11, 3, 2, 4, 8, 4, 11, 7, 2}; {0, 10, 10, 7, 3, 8, 6, 9, 11, 5, 10, 0}; {0, 6, 3, 9, 9, 11, 11, 9, 9, 3, 6, 0}; {0, 10, 8, 7, 0, 11, 7, 10, 0, 5, 1, 5}; {0, 7, 2, 6, 6, 1, 9, 11, 2, 1, 10, 11}; {0, 10, 4, 2, 8, 9, 8, 8, 8, 2, 7, 11}; {0, 0, 8, 7, 8, 11, 4, 10, 2, 0, 6, 2}; {0, 10, 6, 6, 11, 2, 7, 2, 7, 5, 7, 7}; {0, 5, 3, 8, 5, 8, 0, 5, 7, 5, 3, 2}; {0, 10, 9, 8, 1, 11, 4, 1, 6, 9, 1, 6}; {0, 0, 0, 11, 3, 8, 2, 7, 5, 0, 11, 5}; {0, 1, 1, 4, 2, 8, 3, 0, 1, 8, 10, 4}; {0, 9, 7, 2, 9, 1, 10, 11, 11, 2, 6, 8}; {0, 10, 7, 10, 6, 3, 9, 1, 4, 2, 5, 7}; {0, 6, 11, 6, 1, 0, 5, 6, 9, 9, 7, 7}; {0, 3, 1, 3, 4, 6, 0, 3, 0, 9, 7, 2}; {0, 4, 2, 6, 6, 0, 4, 7, 3, 2, 1, 10}; {0, 11, 6, 2, 1, 11, 1, 8, 1, 6, 6, 9}; {0, 1, 0, 11, 5, 5, 11, 0, 5, 0, 7, 0};

{0, 4, 7, 9, 1, 9, 1, 10, 2, 0, 10, 7}; {0, 2, 6, 8, 9, 4, 11, 2, 10, 3, 1, 11}; {0, 0, 11, 6, 7, 7, 10, 4, 9, 9, 3, 10}; {0, 8, 4, 0, 4, 11, 1, 9, 10, 10, 0, 3}; {0, 4, 10, 4, 8, 8, 1, 0, 5, 3, 1, 1}; {0, 0, 8, 1, 2, 10, 4, 8, 6, 0, 3, 3}; {0, 3, 6, 3, 6, 10, 7, 3, 7, 5, 2, 3}; {0, 5, 7, 11, 7, 2, 3, 2, 7, 4, 5, 4}; {0, 0, 4, 7, 11, 7, 6, 3, 9, 6, 9, 6}; {0, 3, 6, 9, 3, 2, 11, 6, 9, 7, 9, 7}; {0, 8, 4, 5, 0, 7, 0, 1, 4, 0, 2, 3}; {0, 10, 3, 0, 4, 5, 10, 3, 5, 2, 11, 0}; {0, 0, 4, 3, 9, 5, 3, 4, 0, 3, 9, 1}; {0, 6, 1, 3, 3, 8, 3, 4, 6, 4, 0, 0}; {0, 3, 11, 2, 6, 7, 6, 4, 3, 9, 6, 2}; {0, 1, 2, 10, 9, 3, 1, 11, 3, 8, 3, 8}; {0, 3, 2, 2, 9, 7, 6, 1, 5, 5, 10, 4}; {0, 4, 5, 7, 2, 9, 6, 6, 1, 5, 2, 2}; {0, 6, 0, 1, 8, 3, 1, 1, 1, 7, 8, 9}; {0, 10, 8, 8, 7, 0, 10, 3, 0, 4, 8, 1}; {0, 4, 8, 10, 4, 3, 0, 8, 10, 8, 11, 9}; {0, 10, 10, 8, 6, 9, 0, 11, 3, 4, 10, 4}; {0, 10, 6, 2, 6, 3, 5, 2, 6, 9, 1, 3}; {0, 9, 7, 5, 10, 7, 11, 8, 11, 1, 5, 9}; {0, 8, 4, 7, 1, 2, 7, 0, 11, 11, 1, 1}; {0, 11, 10, 4, 5, 5, 7, 1, 6, 5, 11, 5}; {0, 8, 7, 6, 1, 10, 2, 1, 3, 5, 11, 3}; {0, 8, 3, 6, 4, 0, 11, 1, 2, 10, 1, 4}; {0, 9, 1, 10, 4, 1, 1, 10, 1, 4, 8, 9}; {0, 7, 0, 5, 10, 10, 4, 3, 10, 10, 11, 10}; {0, 11, 3, 3, 6, 3, 2, 1, 9, 2, 6, 11}; {0, 11, 10, 8, 9, 0, 0, 5, 4, 10, 4, 9}; {0, 1, 11, 1, 3, 9, 9, 4, 2, 6, 0, 8}; {0, 8, 2, 10, 7, 10, 1, 8, 10, 3, 3, 3}; {0, 7, 2, 10, 2, 2, 3, 6, 1, 2, 10, 10}; {0, 1, 10, 10, 1, 3, 0, 7, 7, 0, 7, 2}; {0, 1, 8, 9, 6, 9, 10, 10, 3, 11, 7, 1}; {0, 8, 4, 5, 11, 6, 11, 0, 2, 10, 11, 0}; {0, 5, 5, 6, 10, 1, 8, 8, 6, 5, 9, 5}; {0, 8, 9, 5, 4, 10, 5, 2, 5, 5, 6, 9}; {0, 7, 5, 2, 11, 2, 7, 10, 11, 1, 11, 2}; {0, 3, 6, 11, 0, 8, 6, 5, 8, 5, 10, 7}; {0, 2, 4, 0, 4, 2, 7, 1, 11, 10, 6, 5}; {0, 10, 8, 5, 5, 10, 2, 4, 2, 6, 3, 7}; {0, 8, 7, 3, 0, 1, 3, 0, 3, 2, 7, 0}; {0, 9, 6, 5, 9, 6, 1, 3, 4, 8, 3, 6}; {0, 10, 10, 5, 1, 6, 4, 3, 7, 0, 3, 5}; {0, 11, 10, 7, 11, 10, 11, 5, 0, 4, 5, 10}; and {0, 3, 4, 9, 6, 9, 10, 5, 11, 9, 9, 6}.

11. A computer readable storage medium, configured to store a computer instruction, wherein the computer instruction is used to perform the signal processing method according to claims 1 to 4 and claims 9 to 10.

**Patentansprüche**

1. Sequenzbasiertes Signalverarbeitungsverfahren, wobei das Signalverarbeitungsverfahren Folgendes umfasst:

   Bestimmen (S101) einer Sequenz $\{f_n\}$, die N Elemente umfasst, wobei $f_n$ ein Element in der Sequenz $\{f_n\}$ ist, die Sequenz $\{f_n\}$ eine Sequenz ist, die eine voreingestellte Bedingung erfüllt, die voreingestellte Bedingung $f_n = A \cdot x_n \cdot e^{2\pi j \cdot a \cdot n}$ ist, ein Wert von n von 0 bis N-1 reicht, A eine komplexe Zahl ungleich Null ist, $\alpha$ eine reelle Zahl,

$$j = \sqrt{-1}$$

, für ein Element $X_n$, $x_n = u \cdot e^{2\pi j \cdot s_n / M}$, M=12, ist, u eine komplexe Zahl ungleich Null ist und eine Menge von Sequenzen $\{S_n\}$, die aus einem Element $S_n$ besteht, mindestens eine der Sequenzen in einer ersten Sequenzmenge umfasst, wobei die Sequenzen in der ersten Sequenzmenge einige oder sämtliche der folgenden Sequenzen umfassen:

{-2, 4, -2, 4, 0, 2, 2, 0, 5, 5, 0, 0 {-1, 6, 1, -4, -2, 4, -5, -5, 6, -5, 0, 0}; {3, -3, 3, -3, 0, -2, 2, 0, 5, -5, 0, 0}; {2, -4, 2, -4, -1, -2, -2, -1, -5, 6, 0, 0}; {-4, 2, -4, 3, -1, 1, 2, 1, 4, 5, 0, 0}; {0, 6, 0, -5, -2, -4, -3, -1, 6, 6, 0, 0}; {0, 6, 0, -5, -2, -3, -3, -1, 6, 6, 0, 0}; {-1, 5, -1, 6, -2, -3, -3, -1, 5, 5, 0,0}; {-4, 2, -4, 4, -4, -5, -4, -2, 5, 5, 0, 0}; {-5, 1, -5, 3, -5, 6, -5, -3, 5 5, 0, 0}; {4, -2, 4, 0, -4, -1, 0, -1, 3, 4, 0, 0}, {0, 4, -4, 2, -3, -2,-3, 4, 1, -2, 0, 0}; {-1, 3, -5, 1, -4, -3, -3, 4, 1, -2, 0, 0}; {0, 5, -2, 5, 2, 4, 3, 1, -3, -4, 0, 0}... {-3, 1, 5 -1, -5, -4, -5, 3, 0, -3, 0, 0}; (3, -3, 3, -1, 0, 6, -3, -3, -5,-4, 0, 0}; {1, 6, -1, 6, 6, 0, 2, 0, -3, -1, 0, 0}; {5, -2, 3, -2,0, -1, 0, 0, -5, 6, 0, 0}; {-3, 3, -3, 5, -4, -4, -4, -2, 5, 5,0,0}; {-3, 0, 3,-3, 3, 1, 3,-5, 4, 1, 0, 0}; {-1, 4, -3, 5, 4,-2, 1,0,-3,-2,0, 0}; {3,-1, -5, -5, 1, -4, 0, 1, 4, -1, 0, 0}; {2, -2, 6, 6, 1, -5, 0, 1, 4, -1, 0, 0}; {0, -5, 2, 2, -5, 1, 4, 4, 6, 1, 0, 0}, {1, -3, 5, 6, 0, -5, -1, 1, 3, -1, 0, 0}, {-3, 4, -1, -1, 5, -1, 3, 4, 5, 0, 0, 0}; {-5, 1, -5, 6, -1, 4, -5, -5, -5, 1, 0, 0}; {-2, 5, 0, 0, 6, 0, 3, 4, 5, 0, 0, 0}; {-5, 1, -5, 6, -1, 5, -5, 6, -5, 1, 0, 0}; {3, -3, 3, 3, -4, 2, 5, 5, 6, 0, 0, 0}; {-3, 3, -3, -3, 4, -2, -5, -5, 6, 0, 0, 0}; {4, -3, 2, 2, -4, 1, -2, -3, -5, 0, 0, 0}; {5, -1, 5, 6, 1, -5, 5, 6, 5, -1, 0, 0}; {5, -1, 5, 6, 1, -4, 5, 5, 5, -1, 0, 0}; {3, -4, 1, 1, -5, 1, -3, -4, -5, 0, 0, 0}; {-1, 3, -5, 6, 0, 5, 1, -1, -3, 1, 0, 0}; {0, 5, -2, -2, 5, -1, -4, -4, 6, -1, 0, 0}; {-2, 2, 6, 6, -1, 5, 0, -1, -4, 1, 0, 0}, {-2, 2, 6, 6, 0, 5, 1, -1, -3, 1, 0, 0}; {-3, 1, 5, 5, 1, 4, 0, -2, -4, 1, 0, 0}; {-3, 1, 5, 5, -1, 4, 0, -1, -4, 1, 0, 0}; {-2, 3, -4, -3, 4, -2, -5, -5, 6, -1, 0, 0}; {3, 0, -3, 3, -3, -1, -3, 5, -4, -1,0, 0}; {4, -2, 4, -4, 4, 5, 4, 2, -5, -5, 0, 0}; {-5, 2, -3, 2, 0, 1, 0, 0, 5, 6, 0, 0}; {-1, 5, -1, 3, 5, 1, 1, 6, 5, -1, 0, 0}; {0, 5, 2, -5, -2, -4, - 3, -1, 3, 4, 0, 0}; {4, -2, 4, -3, 6, 6, 4, 3, -5, -5, 0, 0}; {2, -4, 2, -5, 4, 5, 3, 2, -5, -5, 0, 0}; {-3, 3, -3, 2, 0, -5, 4, 3, -1, 0, 0, 0}; {0, 6, 0, 5, 3, 4, 3, 1, 6, 6, 0, 0}; {6, 0, 6, -1, 2, 0, -1, 0, -4, - 5, 0, 0}; {-4, 4, 1, -4, -4, 0, 4, 0, 3, 1, 0, 0}; {-1, 5, 0, 5, 3, 3, 2, 1, 6, -5, 0, 0}; {-3, 2, -4, 0, -2, -4, -5, 4, -4, -4, 0, 0}; {-1, 6, 2, -4, -2, -3, 4, -5, -1, 2, 0, 0}; {5, -2, 4, -3, 5, 6, 5, 3, -5, -5, 0, 0}; {-1, 5, 0, 6, -3, -4, -4, -2, 6, 6, 0, 0}; {-5, 1, -4, 3, -5, 6, -5, -3, 5, 5, 0, 0}; {5, -3, 2, -5, -3, 6, 3, -4, 6, 0, 0, 0}; {3, -5, 0, 5, -4, 5, 2, -5, 5, 0, 0, 0}; {0, 5, -1, 5, 5, -2, -2, 2, 2, 2, 0, 0}; {-5, 0, 6, 0, 2, 0, 0, 1, -4, -5, 0, 0}; {-4, 1, -5, 3, -5, 6, -4, -3, 5, 5, 0, 0}; {-3, 1, 6, 1, -5, -4, -4, 3, 1, -2, 0, 0}; {6, -3, 1, -5, 1, 0, 1, 6, 3, 0, 0, 0}; (-5, -1, 4, 0, 3, -3, -4, 2, 0, -2, 0, 0}; {5, 0, -4, -4, 2, -3, 1, 2, 4, -1, 0, 0}; {3, -2, 6, 6, 1, -4, 0, 1, 4, -1, 0, 0}; {-1, 5, 0, 0, 5, 0, 4, 4, 5, 0, 0, 0}; {5, -1, 6, 6, -1, -2, 4, 6, 2, 0, 0, 0}; {-1, 5, 0, 0, 6, 0, 3, 4, 5, 0, 0, 0}; {-1, 4, -2, -2, 4, -1, -4, -4, 6, -1, 0, 0}; {-5, -1, 4, -3, 3, - 1, -2, -4, 0, 0, 0}; {-3, 1, 6, 5, --1, 4, 0, -2, -3, 1, 0, 0}; {2, 3, -3, -3, 4, -2, -5, -5, 6, -1, 0, 0}; {-5, -1, 4, 3, -2, 3, -1, -2, -4, 0, 0, 0}; {-4, 1, -5, -5, 3, -3, 6, 6, 6, -1, 0, 0}; {6, -2, 3, 2, -3, 2, -1, -3, -4, 0, 0, 0}; {3, 6, -2, -3, 3, -5, 3, 1, -2, 2, 0, 0}; {-5, -1, 4, 4, -3, 3, -1, -2, -4, 1, 0, 0}; {6, -2, 3, 3, -3, 3, -1, -2, -4, 0, 0, 0}; {5, -3, 2, 2, -4, 2, -2, --3, -5, 0, 0, 0}; {5, 1, -2, 4, -2, 0, -3, 6, -4, -1, 0, 0}; {3, -2, 6, -1, 4, 5, 1, -2, -2, 0, 0, 0}; {5, -1, -5, -1, 1, 3, -3, 3, 3, 1, 0, 0}; {4, 1, 0, -5, 1, 6, 2, 2, 5, -3, 0, 0}; {3, 1, -3, 3, -3, -1, 6, -4, -5, -1, 0, 0}; {1, -3, -5, 1, -5, -2, 6, -5, 6, -3, 0, 0}; {2, -5, 2, -5, 4, 5, 3, 2, -5, 0, 0}; {-1, 3, -3, 1, 0, 4, 1, -5, 6, 2, 0, 0}; {-2, 2, -4, 0, -1, 3, 1, 6, 5, 3, 0, 0}; {5, -1, -5, 2, -5 -1, 3, 5, 4, 4, 0, 0}; {5, -1, -5, 2, -5, -1, 3, 6, 5, 4, 0, 0}; {0, 4, -2, 3, 6, 4, 0, 6, 4, 0, 0, 0}; {-3, 3, -1, 6, -5, -2, -4, -2, 3, 3, 0, 0}; {-4, -1, 4, -3, -1, -5, 3, -4, 5, 0, 0, 0}; {-5, -2, 3, -4, -2, -5, 4, -4, 6, 0, 0, 0}; {0, 4, -2, 4, -2, -3, -1, -1, 4, 3, 0, 0}; {6, -3, 2, -5, 4, -5, -5, -3, 6, 3, 0, 0}; {6, -2, 4, -2, -4, 1, 0, 4, 4, 2, 0, 0}; {6, -2, 4, -2, -3, 2, 1, 5, 4, 2, 0, 0}; {4, -3, 4, 0, 0, 6, -5, -1, 1, -1, , 0 0}; {-1, 2, -5, 1, 0, 4, 3, 6, 5, 3, 0, 0}; {3, 5, -3, 2, 3, -1, 6, -1, -5, 1, 0, 0}; {-2, 1, 6, 0, -5, -4, -2, -2, 4, 2, 0, 0}; {-3, 2, -3, 6, -3, 3, 4, -1, -2, -3, 0, 0}; {1, 3, -5, 1, 2, -3, 4, -3, 5, 0, 0, 0}; {0, 2, 6, 0, 1, -3, 4, -3, 5, 0, 0, 0}; {-3, -1, 3, -2, 6, -2, 5, -3, -5, 5, 0, 0}; {0, 3, -4, -5, 1, 6, 1, 0, -3, 1, 0, 0}; {-4, 3, 0, 4, -4, -3, 4, 0, 0, -1, 0, 0}; {-4, 4, 2, -5, 0, 3, -2, -5, -2, 0, 0, 0}; {-5, 3, 1, 6, -1, 2, -2, -5, -2, 0, 0, 0}; {5, 1, 5, -2, 2, -3, 6, -2, 0, 0, 0}; {-4, 4, 3, -3, 3, -5, 4, 5, 5, -4, 0, 0}; {4, -1, -3, 3, -3, -1, -5, -4, 6, -2, 0, 0}; {-1, 5, 2, -4, -4, 1, 5, -1, 1, 0, 0, 0}; {-3, 3, 0, 6, -5, -1, -5, -2, 3, 2, 0, 0}; {2, 6, 1, 6, 6, -1, -2, 4, 3, 1, 0, 0}; {-1, 2, -4, 0, 0, 4, 2, -5, 5, 2, 0, 0}; {-2, 4, 1, -4, 3, -5, -1, 4, 4, 3, 0, 0}; {-5, -1, 6, -1, -3, 1, 2, , 4, 2, 0, 0}; {4, -4, 3, -4, -5, 0, -1, 4, 4, 1, 0, 0}; {4, -4, 3, -4, -5, 0, -1, 4, 4, 2, 0, 0}; {2, 5, -1, 3, -1, 5, 3, -4, 6, 3, 0, 0}; {1, 4, -2, 3, 1, 5, 3, -5, 6, 3, 0, 0}; {3, -4, 4, -1, -1, 5, 6, -1, 1, -1, 0, 0}; {-2, 1, -5, 0, -1, 3, 2, 6, 5, 3, 0, 0}; {-2, 4, 1, -3, 3, -5, 0, 3, 3, 3, 0, 0}; {6, -2, 5, -1, 5, 5, -4, -4, 5, 5, 0, 0}; {5, -3, 4, -2, 5, 5, -5, -4, 5, 5, 0, 0}; {5, -2, 6, 1, 0, 6, -5, 0, 2, 0, 0, 0}; {1, 4, 2, 3, 0, 4, 4, -4, 6, 3, 0, 0}; {0, 2, -5, 0, 1, -3, 4, -3, 5, 0, 0, 0}; {-2, 0, 5, -2, 0, -4, 4, -3, 6, 0, 0, 0}; {5, -5, 0, 6, 3, -5, 5, -4, 6, 5, 0, 0}; {-5, -2, 4, -1, 5, -4, -5, 3, 0, -2, 0, 0}; {-3, -1, 4, 2, 4, -1, 6, 1, 0, 4, 0, 0}; {5, -5, 1, -1, 2, -3, 4, -1, -1, 3, 0, 0}; {-2, -5, -4, 2, -3, 2, 0, 2, 3, -5, 0, 0}; {0, -5, 6, -1, 3, 6, 1, -3, -1 -1, 0, 0}; {5, 0, -1, 5, 5, -3, 3, -2, 1, 0, 0, 0}; {1, -4, -5, 1,

3, -5, 1, --3, 0, -1, 0, 0}; {-5, 2, 1, -5, -2, 3, -3, 6, -2, 0, 0, 0}; {0, 6, 4, -2, -4, 1, 5, -1, 1, 1, 0, 0}; {-1, 4, 1, -5, -3, 3, 4, -1, 0, -2, 0, 0}; {-2, 4, 2, -3, 1, 5, 4, 5, -1, 2, 0, 0}; {-3, -1, 5, -2, -1, - 5, 3, -4, 5, -1, 0, 0}; {-5, -3, 3, -4, -2, 6, 1, -5, 4, -1, 0, 0}; {6, -5, 0, 4, 5, 0, -5, -1, -5, 1, 0, 0}; {0, 4, 0, -5, -1, 4, 5, 1, -1, -3, 0, 0}; {2, -3, -3, 3, 5, 1, -4, 1, -2, -1, 0, 0}; {-3, 3, 2, -4, -3, 5, -1, 3, 0, 0 0, 0}; {-4, 2, 1, -5, -4, 4, -2, 2, 0, 0, 0, 0}; {-3, -1, 6, -4, 6, -2, 5, -1, -4, 5, 0, 0}; {1, -4, -4, 3, 2, 6, 0, -3, 0, -1, 0, 0}; {-1, 5, 4, -2, -4, 0, 5, 0, 2, 1, 0, 0}; {0, -5, -5, 2, 1, 6, 0, -4, -1, -1, 0, 0}; {-1, 6, 6, 1, 1, 6, 0, -4, -1, -1, 0, 0}; {-4, 2, 1, -5, 6, -1,3, -2, 1, 0, 0, 0}; {-3, 4, 4, -1, -1, 5, -2, 6, -2, -2, 0, 0}; {-4, 3, 3, -2, -2, 4, -2, 6, -2, -1, -3, -1, 0, 0}; {-4, 3, 3, -2, -1, 4, -2, -5, -1, -1, -3, -1 , 0, 0}; {-5, 1, -3, -1 , 0, 6, 6, -2, 4, -1, -3, -1, 1, 0, 0 0}; {-4, 3, 3, -2, -1, 4, -1, -5, -1, - 1, 0, 0}; {3, 5, 0, 3, -4, 4, 2, -5, 5, - 1, 0, 0}; {-3, 3, 2, -3, 6, -3, 3, 0, 1, -1, 0, 0}; {1, 4, 0, -5, -1, 4, 5, 1, -1, -4, 0, 0}; {-3, -2, 4,-2, -1, -5, 2, -5, 4, - 1, 0, 0}; {-4, 2, 2, -5, -3, 4, -2, 3, 0, 0, 0, 0}; {5 -3, -5, -1, -3, 4, -4, -3, 5, 4, 0, 0}; {-5, 3, 5, 1, 3, -4, 4, 3, -5, -4, 0, 0}; {6, 0, 0, 6, -5, 3, -2, 2, -1, 0, 0, 0}; {6, 0, 0, 6, -5, 3, -2, 3, -1, 0, 0, 0}; {-4, 2, 2, -4, 6, -2, 4, - 1, 1, 1, 0, 0}; {-5, 1, 1, -5, 5, -3, 3, -2, 1, 1, 0, 0}; {6, 0, 0, 6, 5, -3, 2, -2, 1, 0, 0, 0}; {6, 0, 0, 6, 5, -3, 3, -2, 1, 0, 0, 0}; {4, -2, -2, 5, 3, -4, 2, -3, 0, 0, 0, 0}; {6, 3, -5, 2, -4, 6, 5, 3, 6, -5, 0, 0}; {-3, -5, 0, -3, 4, -4, -2, 5, -5, 1, 0, 0}; {-4, 3, 5, -1, -5, 2, 6, -5, 0, 0, 0, 0}; {4, -2, -1, 5, 4, -4, 2, -2, 0, 0, 0, 0}; {-1, 4, 4, -3, -2, 6, 0, 3, 0, 1, 0, 0}; {0, -5, -3, 4, -4, 5, 1, -5, -5, -2, 0, 0}; {5, -2, -2, 3, 0, 4, -4, 3, 1, -3, -1 , 2, 0, 0}; {0, 6, -5, 2, 0, 5, 0, -4, -1, 0, 0, 0}; {-2, 3, 3, -3, -5, -1, 4, -1, 2, 1, 0, 0}; 3, -4, -4, 2, -2, 1, -3, -1, -5, 3, 1, 1, 0, 0}; {2, -4, -3, 4, 1, 6, 1, -3, -1, 0, 0, 0}; {0, 4, 3, -4, 3, 6, -1, 6, 4, 2, 0, 0}; {-5, 5, -1, 1, -2, 3, -4, 1, 1, -3, 0, 0}; {-1, -3, 3, -4, 6, 3, -2, 0, -5, -1, 0, 0}; {-4, 4, -4, 1, -5, -4, 6, 4, -5, -5, 0, 0}; {6, 5, 0, -4, -5, 0, 5, 1, 5, -1, 0, 0}; {5, 3, -3, 4, 2, 6, -1, 5, -4, 1, 0, 0}; {3, 1, -5, 2, 1, 5, -3, 4, -5, 1, 0, 0}- {4, -1, 2, -5, 0, -1, -3, -5, -4, -3, 0, 0}; {3, -2, 1, -5, 1, -2, -4, 6, -5, -3, 0, 0}; {-4, 1, 2, -5, -4, 4, -2, 5, 0, 1, 0, 0}; {2, -4, -2, 4, 0, 5, -3, -3, 1, -1, 0, 0}; {5, -2, -1, 5, 2, -3, 3, 6, 2, 0, 0, 0}; {2, 5, 4, -2, 3, -2, 0, -2, -3, 5, 0, 0}; {-5, -1, 0, -5, 2, -2, 3, 6, 2, 0, 0, 0}; {3, 1, -4, -2, -4, 1, 6, -1, 0, -4, 0, 0}; {2, -1, 5, 2, -5, 5, 0, 1, -4, -1, 0, 0}; {2, 0, -5, 2, 0, 4, -4, 3, 6, 0, 0, 0}; {0, -2, 5, 0, -1, 3, -4, 3, -5, 0, 0, 0}; {4, -1, 3, -4, 2, -1, -4, 6, -5, -4, 0, 0}; {2, -4, -1, 3, -3, 5, 0, -3, -3, -3, 0, 0}; {4, -2, 1, 6, 0, -1, -3, -5, -4, -3, 0, 0}; {-1, 5, -4, 1, -5, 3, -1, -4, 4, -3, 0, 0); {-2, 4, -5, 0, 6, 2, -1, -4, -4, -3, 0, 0}; {3, -3,0, 6, 5, 1, 5, 2, -3, -2, 0, 0}; {5, 2, -4, 5, 1, 5, -4, 4, 6, 0, 0, 0}; {3, 3, 0, 1, -5, 0, 6, 2, -4, -4, 0, 0}; {4, -4, -3, 3, -3, 5, -4, -5, -5, 4, 0, 0}; {-1, 3, 5, -1, 5, 2, 6, 5, 6, 3, 0, 0}; {-3, 1, 3, -3, 3, 1, 6, 4, 5, 1, 0, 0}; {-4, -1, 0, 5, -1, 6, -2, -2, -5, 3, 0, 0}; {-5, -1, 1, -4, 2, -1, 3, 6, 4, 1, 0, 0}; {5, -3, -1, 6, 1, -2, 2, 5, 2, 0, 0, 0}; {4, -4, -2, 5, 0, -3, 2, 5, 2, 0, 0, 0}; {4, -3, 0, -4, 4, 3, -4, 0, 0, 1, 0, 0}, {4, -2, 2, -1, -1, 6, -1, -3, -5, -4, 0, 0}; {0, -3, 4, 5, -1, 6, 0, 3, -1, 0, 0}; {0, -2, 6, 0, -1, 3, -4, 3, -5, 0, 0, 0}; {-1, -3, 5, -1, -2, 3, -4, 3, -5, 0, 0, 0}; {-5, 2, -5, -1, 6, -5, 6, 4, -5, -5, 0, 0}; {-5, 3, -3, 2, -2, 0, 1, 0, 4, 5, 0, 0}; {-3, -5, 3, -2, -3, 1, 6, 1, 5, -1, 0, 0}; {-3, 5, -1, 5, -1, 1, 2, 1, 4, 5, 0, 0}; {-4, 4, -2, 4, -2, 1, 2, 1, 4, 5, 0, 0}; {-5, 3, -3, -2, 0, 1, 0, 4, 5, 0, 0}; {4, -1, 4, -3, 4, 5, 5, 3, 6, 6, 0, 0}; {1, -4, 1, 6, 1, 2, 6, 5, 1, -1, 0, 0}; {2, -3, 2, -5, 3, 4, 4, 2, 6, 6, 0, 0}; {5, 2, -3, 4, 2, 5, -4, 4, 6, 0, 0, 0}; {4, 1, -4, 3, 1, 5, - 3, 4, -5, 0, 0, 0}; {-5, 3, -3, 5, 3, -5, -3, 4, 6, 0, 0, 0}; {-2, 6, 0, 4, 4, -5, -2, 5, -5, 0, 0, 0}; {3, -2, 3, -1, 0, 6, -2, -3, -5, 0, 0, 0}; {0, -5, 0, -4, 1, 3, 2, 1, 5, 5, 0, 0}; {-1, 6, 0 -4, 3, 2, 2, -4, -1, 2, 0, 0}; {6, 1, -5, 3, -5, 6, -5, -2, 3, 4, 0, 0}; {-1, 5, -2, 6, -1, 2, 2, 0, 4, 4, 0, 0}; {-3, 2, 6, 1, -4, -5, -1, 2, 2, 0, 0, 0}; {-5, -1, 2, -4, 2, 0, 3, 6, 4, 1, 0, 0}; {5, -1, 4, 1, -2, -3, 3, -4, -2, -1, 0, 0}; {0, -4, 3, 3, -4, -4, 0, 4, 0, 1, 0, 0}; {-5, 3, -2, -2, 4, -2, 2, 3, 5, 0, 0, 0}; {6, 2, -3, 3, -3, 1, 2, 4, 0, 0, 0}; {5, 1, -4, -4, 3, 1, 2, 4, -1, 0, 0}; {6, 2, -3, -2, 3, -2, 1, 3, 4, 0, 0, 0}; {4, -1, 5, 5, -3, 3, 6, 6, 6, 1, 0, 0}; {5, 1, -4, -3, 2, -3, 1, 2, 4, 0, 0, 0}; {5, 1, -4, -3, 3, -3, 1, 2, 4, 0, 0, 0}; {2, -3, 3, 3, -4, 2, 5, 5, 6, 1, 0, 0}, {1, -4, 2, 2, -4, 1, 4, 4, 6, 1, 0, 0}; {1, -5, 0, 0, 6, 0, -3, -4, -5, 0, 0, 0}; {-5, 1, 6, 6, 1, 2, -4, 6, -2, 0, 0, 0}; {1, -5, 0, 0, -5, 0, -4, -4, -5, 0, 0, 0}; {-3, 2, 6, 6, -1, 4, 0, -1, -4, 1, 0, 0}; {-5, 0, 4, 4, -2, 3, , -1, -2, -4, 0, 0, 0}; {6, - 1, 3, 3, -2, 3, --1, -3, -4, 1, 0, 0}; 1, -3, 6, 0, 3, -1, 2, 3, 3, -4, 0, 0}; {6, 3, -1, 5, -1, 0, -1, 6, -3, 0, 0, 0}; {6, 2, -3, 2, -4, -1, 3, 4, -1, -1, 0, 0}; {3, -2, 4, -4, 3, 4, 5, 3, 6, 6, 0, 0}, {4, -1, 5, -3, 5, 6, 4, 3, -5, -5, 0, 0}; {1, -4, 2, 6, 2, 3, 4, 2, 6, 6, 0, 0}; {1, -4, 2, -5, 3, 4, 3, 2, 6, 6, 0, 0}; {-2, 5, -1, 4, 1, 2, 2, 1, 5, 6, 0, 0}; {5, -1, 4,-3, 5, 3, -5, -5, 0, 0}; {-5, 3, -2, 5, 3, 6, -3, 4, 6, 0, 0, 0}; {-3, 4, -2, 4, 1, 1, 2, 1, 4, 5, 0, 0}; {-5, -4, 2, -2, 0, 1, 0, 4, 5, 0, 0}; {-3, 5, 0, -5, 4, -5, -2, 5, -5, 0, 0, 0}; {6, 0, 5, -1, -5, -5, 5, 4, -4, -4, 0, 0}; {2, -4, 1, -5, 3, 4, 4, 2, 6, 6, 0, 0}; {2, -4, 1, -5, 4, 4, 4, 2, 6, -5, 0, 0}, 1 1, 6, 0, -5, -2, -4, -3, -1, 5, 5, 0, 0}; {-1, 6, 0, -5, 2, -3, -3, -1, 5, 5, 0, 0}; {-4, 3, -3, 4, -4, -5, -4, -2, 5, 5, 0, 0}; {-5, 2, -4, 3, -5, 6, -5, -3, 5, 5, 0, 0}; und {-5, 2, -4, 3, -4, -5, -5, -1, 2, 4, 0, 0}; und {-2, 5, - 1, 6, -1, 2, 3, 1, 4, 5, 0, 0};

{-3, 2, -5, 0, -1, -3, -5, 5, -3, -4, 0, 0}; {6, 0, 6, 0, 4, -5, -4, 2, 0, -2, 0, 0}; {0, 0, 0, 1, 10, 8, 5, 0, 4, 9, 10, 2}; {1, -5, 1, -3, -5, -1, -1, 6, -5, 1, 0, 0}; {-4, 1, 6, 1, -2, 6, 0, 2, 4, 3, 0, 0}; 3, 1, 5, 0, -5, -3, -4, 3, 0, -2, 0, 0}; {4, 5, 6, -2, 3, -1, 4, -1, -2, 4, 0, 0}; {-4, -1, 2, -4, 6, -2, -4, ~5, -4, 3, 0, 0}; {-2, 3, -4, 4, 5, 6, 1, 1, -3, -5, 0, 0}; {0, 0, 0, 4, 8, 11, 9, 6, 10, 5, 0, 11}; {2, -4, 2, 1, 6, 4, -5, -1, 3, 1, 0, 0}; {5, 3, 1, 5, 1, 3, -2, 5, 6, -3, 0, 0}; {4, 6,

-4, 4, -3, 6, 0, 6, 6, 3, 0, 0}; {-4, 0, 4, 3, -2, 3, -1, -2, -5, 0, 0, 0}; {-5, -5, -5, 2, 6, -2, 6, 4, -3, 6, 0, 0}; {-2, -4, 6, 0, 5, -3, -5, 3, -4, -1, 0, 0}; { 1, -2, -5, 0, 5, 0, 3, 2, 4, 6, 0, 0}; {2, -3, 4, -4, -5, 6, -1, -1, 3, 5, 0, 0}; {4, 0, -4, 2, 1, 4, -4, 3, 5, 0, 0, 0}; {3, -2, 5, -2, 0, -2, -3, 3, 3, -2, 0, 0}; {5, -1, 5, -2, 0, 0, --1, 0, -4, 6, 0, 0}; {6, 1, -3, 3, -4, 0, 4, 6, 6, 5, 0, 0}; {6, 0, -5, 1, 0, 2, 0, 0, 5, 5, 0, 0}; {-1, 6, 2, -2, 3, -4, 0, 3, 3, 3, 0, 0}; {-1, 5, 0, -5, 3, 2, 2, -5, -2, 1, 0, 0}; {1, 6, 0, -5, 4, -2, 0, 3, 3, 3, 0, 0}; {0, 0, 1, 3, 11, 7, 11, 4, 5, 0, 0, 7}, {6, -3, L -5, -2, -5, 3, --4. 6, 1, 0, 0}; {0, 2, 5, -2, 5, 3, 3, -3, 4, 0, 0, 0}; {-4, 1, -5, 4, -4, -5. -4, -2, 5, 4, 0, 0}; {2, 4, -5, 1, 5, 0, -5, 5, 3, -1, 0, 0}; {0, 0, 1, 5, 9, 2, 10, 3, 0, 8, 4, 4}; {-2, -1, 1, -5, 3, 6, 2, 0, -1, 6, 0, 0}; {0, 0, 1, 6, 3, -1, 4, 6, 1, 5, 0, 0}; {-5, 1, -4, -5, -1, 5, -5, -5, -4. 2, 0, 0}; {1, -5, 2, 1, 5, 0, 1, -3, -5, -4, 0, 0}; {-4, 0, 5, 2, -3, -4, 4, -2, 1, 1, 0, 0}; {0, 0, 1, 6, 11, 3, 10, 7, 4, 11, 2, 1}; {5, -1, 6, 6, 5, 2, -5, 4, 6, -4, 0, 0}; {-2, -5, 5, -4, 4, 6, 1, 6, -4, -4, 0, 0}; {-4, 3, -1, 0, 6, 6, -1, 3, -1, -1, 0, 0}; {0, 0, 1, 9, 0, 1, 6, 1, 8, 8, 5, 0}; {0, 0, 1, 9, 2, 5, 4, 8, 5, 11, 0, 6}; {-1, -5, 4, -4, 3, 5, 0, 6, -5, -1, 0, 0}; {0, 0, 1, 10, 1, 8, 11, 3, 2, 8, 7, 2}; {2, -4, 3, -5, -5, 5, -2, 0, 4, 4, 0, 0}; {2, -4, 3, -5, -5, 5, -1, 0, 3, 4, 0, 0}; {0, 0, 2, 0, 8, 9, 6, 10, 3, 9, 9, 2}; {-3, 1, -5, -2, -2, 3, -1, 6, 5, 1, 0, 0}; {3, -4, 3, -4, 5, 5, 2, 2, -4, -3, 0, 0}; {-1, 0, 3, 4, -1, -5, 2, -5, 2, 3, 0, 0}; {-5, 0, -5, 1, 3, -4, -4, 2, 1, 0, 0, 0}; {4, -5, 0, 4, 2, 6, 3, -4, 6, 4, 0, 0}; {0, 4, -2, 4, -3, -4, -1, -2, 6, 5, 0, 0}; {5, -4, 1, 6, 1, -1, 1, 0, 6, 3, 0, 0}; {-1, 6, 3, 1, 6, -1, -2, 0, -5, -1, 0, 0}; {3, 6, -1, 5, 0, -2, 0, -2, -4, -5, 0, 0}; {3, -3, 5, 2, 2, -3, 1, -5, -3, -1, 0, 0}; {4, -5, 0, -5, -4, 0, 2, 1, 5, 1, 0, 0}; {-3, 0, 5, 0, -5, -3, -5, 3, 0, -2, 0, 0}; {0, 0, 2, 7, 6, 4, 11, 8, 5, 9, 4, 7}; {-3, 0, 5, 2, -5, 3, -1, -2, 2, 2, 0, 0}; {-1, -1, 1, -4, 6, -3, 3, -2, -1, 5, 0, 0}; {3, 6, -1, -2, 3, -5, 3, 1, -2, 2, 0, 0}; {3, -1, -3, 1, 2, 5, 3, -5, 1, 4, 0, 0}; {0, 0, 2, 10, 4, 0, 11, 9, 6, 0, 3, 5}; {4, -2, 6, 3, -4, 6, 1, 0, 3, 6, 0, 0}; {-1, 0, 3, 1, 0, -5, -2, 5, 1, 6, 0, 0}; {0, 0, 2, 11, 10, 4, 6, 9, 3, 8, 2, 9}; {0, 0, 2, 11, 11, 5, 6, 2, 5, 10, 6, 1}; {-5, -2, 4, 4, -2, 3, 0, -2, -4, 0, 0, 0}; {6, 6, -3, -5, 3, -2, 2, -4, 3, 5, 0, 0}; {0, -4, -5, 1, -5, -2, 5, -4, -5, -1, 0, 0}; {-4, 4, 3, -2, 1, 5, -1, -4, -1, -2, 0, 0}; {2, -5, 3, -4, 3, 3, 6, -5, 4, 5, 0, 0}; {0, 0, 3, 3, 7, 1, 5, 3, 1, 11, 7, 11}; {0, 0, 3, 3, 11, 8, . 5, 7, 3, 6, 11, 4}; {1, 6, 2, -4, -2, 0, -2, -1, 4, 3, 0, 0}; {0, 0, 3, 4, 11, 1, 7, 10, 5, 11, 6, 3}; {2, -2, -3, -5, 0, 5, -4, -4, 1, -3, 0, 0}; {-3, 5, 4, 3, -3, 2, 5, -5, 0, -3, 0, 0}; {0, 0, 3, 6, 5, 2, 7, 4, 1, 7, 0}; {-3, 1, -4, 3, 6, -2, -3, 5, 1, -1, 0, 0}; {-1, 2, -4, 2, -4, 6, 1, 2, -2, -2, 0, 0}; {-1, 2, -4, 2, -4, -4, -1, -2, 4, 2, 0, 0}; {0, 0, 3, 8, 2, 2, 9, 7, 6, 2, 6, 3}; {0, 0, 3, 8, 10, 7, 4, 3, 8, 4, 8, 6}; {3, 2, 4, -3, 6, -1, 5, 0, 1, 5, 0, 0}; {2, 1, 3, 4, 5, -2, 5, 0, 1, 5, 0, 0}; {-5, 3, 2, 5, 3, 0, 4, -3, 5, -4, 0, 0}; {-3, 0, 6, 5, 0, 2, 4, 4, -1, -1, 0, 0}; {0, 0, 4, 0, 6, 1, 9, 7, 6, 2, 5, 8};

{-2, 1, -4, -4, 4, --4, 3, -1, -4, -2, 0, 0}; {0, 0, 4, 1, 8, 3, 5, 3, 2, 9, 11, 4}; {5, 1, 1, 6, -1, 2, -2, -5, -3, -3, 0, 0}; 1-5, 4, 5, -1, 6, -5, 1, 5, 5, -2, 0, 0}; {6, 3, 4, 0, 6, 4, -2, 4, 6, -2, 0, 0}; {-5, 6, -3, -5, 3, -1, 2, -2, 3, 6, 0, 0 {-2, 2, -2, 1, 5, 2. -2, 6, 4, -1, 0, 0}; {-5, -1, -5, -2, 4, -1, -4, 4, 5, 6, 0, 0}; {6, 6, -2, -3, 4, -2, 5, -3, 3, 3, 0, 0}; {3, 3, -5, -5, 1, -3, 3, -4, 2, 3, 0, 0}; {1, 4, -1, 4, -3, -3, 0, -2, 6, 2, 0, 0}; {6, 1, 0, -2. 3, -5, -2, -3, 2, -2. 0, 0}; {3, --5, 3, -1, -5, 6, 2, 5, -2, 0, 0, 0); {0, 1, 6, -1, 6, 3, 4, -1, -2, 2, 0, 0}; {0, 0, 4, 8, 6, 2, 2, 11, 3, 4, 0, 5}; {-1, 6, 5, 4, -2, 1, -2, 0, 1, -4, 0, 0}; {6, -4, 2, -4, -1, 4, 1, -5, 3, 0, 0, 0}; {0, 4, 0, -4, 2, -2, -2, 6, -4, 0, 0, 0}; {0, 0, 4, 8, 10, 3, 11, 4, 2, 2, 11, 6}; {-3, 1, -3, 6, -4, 6, 5, -1, -5, -4, 0, 0}; {1, 3, -3, 4, 6, -3, 2, 0, 5, 1, 0, 0}; {0, 0, 4, 10, 2, 4, 7, 6, 10, 7, 5, 3}; {1, 4, -1, -3, -1, -4, 5, -2, -2, -5, 0, 0}; {0, 0, 4, 11, 11, 0, 11, 9, 3, 5, 2, 8}; {5, 1, 2, 6, 0, 2, -2, 6, -3, -4, 0, 0}; {3, -3, -4, -1, 3, -2, -5, -5, -1, 4, 0, 0}; {0, 0, 5, 2, 1, 2, 1, 9, 6, 10, 3, 8}; {0, 0, 5, 2, 1, 5, 2, 5, 0, 10, 0, 7}; {2, -4, -5, -1, 2, -4, -4, 4, -1, 1, 0, 0}; {5, 2, 4, -1, 5, 6, 1, 5, 5, -3, 0, 0}; {5, 0, 0, 5, -4, 3, 5, 1, -3, 0, 0, 0}; {0, -3, -1, -5, 2, -3, -4, 3, -5, -2, 0, 0}; {0, -4, -3, 4, -2, -5, 1, 6, -5, -1, 0, 0}; {-3, -5, -2, -4, 4, -4, 1, 6, -4, 6, 0, 0}; {3, 6, 2, 5, -5, 2, -2, 5, 5, 5, 0, 0}; {2, -4, -5, 1, 1, -5, 2, 6, 1, 1, 0, 0}; {-4, 2, 1, -4, -2, 3, -3, 6, -2, 0, 0, 0}; {-5, 4, 6, 4, -3, 0, -4, 2, 2, -4, 0, 0}; {-3, -1, 6, -3, 1, 0, 4, 2, -5, 3, 0, 0}; {-1, 4, 2, -3, -4, 0, 6, -2, 2, 0, 0, 0}; {-1, 0, 6, -3, 6, -2, 6, -1, -4, 6, 0, 0}; {-3, -1, 6, -2, 3, 1, 0, 5, 3, -2, 0, 0}; {-4, -1, -5, 1, 0, 5, 0, 3, 5, 4, 0, 0}; {0, -1, 3, -5, 4, -1, 4, 5, 0, 4, 0, 0}; {-1, -1, 4, -5, -4, 3, -2, 1, -3, 2, 0, 0}; {2, -4, -4, -1, 2, -3, -4, 4, -1, 2, 0, 0}; {-3, -5, -1, -5, 4, 3, -3, -1, 5, -2, 0, 0}; {-3, 1, -1, 1, 5, 1, -3, 5, 3, 4, 0, 0}; {-2, -3, 2, -1, 3, 4, -3, 2, 5, 2, 0, 0}; {-4, -5, 0, -2, -4, -3, 3, 6, 2, -5, 0, 0}, {0, 0, 6, 5, 8, 6, 6, 8, 1, 6, 11, 7}; {-5, 5, -3, 6, -4, 1, -3, 1, 4, 6, 0, 0}; {-4, 1, 0, 5, 1, 4, -2, 4, 4, 1, 0, 0}; {6, -3, 6, -3, 3, 6, -5, -1, -5, 4, 0, 0}; {4, 2, 6, 4, 6, 0, -4, 0, 3, 6, 0, 0}; {-4, 2, 2, -4, 6, -1, 4, -1, 0, 0, 0, 0}; {-4, 6, -2, -3, 1, -5, 0, 3, 6, 3, 0, 0}; {0, 0, 6, 7, 5, 5, 0, 4, 6, 3, 10, 4}; {-4, -1, -4, 1, -3, 2, 3, -3, 4, 3, 0, 0}; {4, -5, 4, -3, 2, 4, -2, -4, 4, 0, 0, 0}; {-2, 4, 4, 1, -2, 3, 4, -4, 1, -2, 0, 0}; {4, -5, 4, -2, -2, 3, -2, 1, 4, 3, 0, 0}; {0, 0, 6, 9, 6, 10, 5, 9, 8, 1, 11, 9}; {0, 0, 6, 9, 11, 3, 11, 3, 0, 1, 9, 4}; {0, 0, 6, 10, 2, 1, 4, 0, 8, 8, 11, 8}; {-2, -3, 2, 6, 1, -5, -3, 3, 1, -2, 0, 0}; {6, 4, -3, 2, -2, 5, 5, -2, 0, 3, 0, 0}; {4, 2, -5, 0, -3, 6, 0, 2, -4, 0, 0, 0}; {3, 0, 4, -2, 0, 6, 0, -3, -5, -3, 0, 0}; {0, 0, 7, 5, 0, 9, 2, 9, 3, 6, 4, 5}; {-3, 5, -4, 2, 2, -2, 2, -1, -4, -3, 0, 0}; {-2, -3, 3, 1, -4, -3, 4, -4, 2, -2, 0, 0}; {-1, 6, -4, 2, -5, 3, 0, -4, -3, -2, 0, 0}; {-3, 2, 2, 6, -1, -5, 3, 3, 0, 3, 0, 0}; {0, 0, 7, 6, 9, 3, 3, 1, 3, 5, 1, 5}; {-3, -5, 0, -2, 2, 4, -3, 2, 5, 2, 0, 0}; {1, -3, 0, -4, 1, -2, -4, 4, -5, -3, 0, 0}; {-3, 6, -2, -5, -4, 2, -2, 1, 4, 6, 0, 0}; {0, 0, 7, 8, 2, 1, 9, 4, 9, 7, 8, 10}; {0, 3, 1, 5, -2, 3, 4, -3, 5, 2, 0, 0}; {-2, 4, 5, 1, -2, 4, 4, -4, 1, -1, 0, 0}; {-5, 0, 0, -5, 4, -3, -5, -1, 3, 0, 0, 0}; {4, -1, 1, 6. -3, -5, -1, -1, -5, 0, 0}; {4, 0, -1, 6, 0, 1, -5, 3, 5, 1, 0, 0}; {0, 0, 7, 11, 5, 3, 6, 3, 0, 0, 4, 3}; {0, 0, -5, -1, 6, -4, 1, -3, 6, -1, 0, 0}; {0, 0, 7, 11, 10, 11, 4, 3, 7, 0, 8, 8}; {-4, 5, -2, 0, 6, -4, 5, 2, -3, 0, 0, 0}; {0, 4, 4, 2, 2, -3, -1, 4, -2, -5, 0, 0}; {0, 0, 8, 3, 3, 2, 4, 10, 2, 0, 8, 0}; {2, 1, -4, 2, 3, -3, 3, 6, 4, -2, 0, 0}; {4, 2, -4, 2, 5, 1, 6, 5, 5, 6, 0, 0}; {1, -3, 1, 6, 6, -3, 1, 0, -2, 3, 0, 0}; {2, -1, 4, -1, 6, 5, 1, 2, -4, -1, 0, 0}; {4, 2, -4, 4, 1, 5, -4, 4, 6, 0, 0, 0}; {1, -3, 1, -4, 0, -3, -3, 0, 6, 6, 0, 0}; {-3, 5, -3, 4, -2, 4, 6, 4, -5, -4, 0, 0}; {-2, -5, 0, -4, 6, 5, -4, -1, 5, -3, 0, 0}; {0, 0, 8, 8, 0, 10, 8, 2, 7, 2, 9, 0}; {3, -3, -1, 5, 5, 1, 5, 1, -3, -1, 0, 0), {-4, -5, 2, 1, 6, -3, 3, -3, 1, -1, 0, 0}; {0, 0, 8, 8, 2, 8, 3, 10, 2, 0, 2, 4}; {6, 2, -2, 2, 3, -2, 3, -3, 3, 2, 0, 0}; {-5, 6, 1, 0, 2, -1, 4, -1, 2, -5, 0, 0}; {-2, 1, 0, 3, -3, -1, 5, -2, -5, 4, 0, 0}; {-3, 1, 1, 6, 3, -1, 4, 6, 3, 2, 0, 0}; {6, -1, 0, 6, 5, -4, 2, -3, 1, 0, 0, 0}; {-3, 3, 5, 0, -4, 1, -2, -4, -3, -4, 0, 0}; {-4, 0, 0, 6, 0, -5, -2, -4, 5, 0, 0, 0}; {0, 0, 8, 10, 0, 7, 2, 0, 4, 8, 6, 9}; {4, 1, 6, 5, -3, 5, -2, 2, 5, 2, 0, 0}; {0, 0, 8, 11, 9, 4, 11, 2, 6, 5, 5, 10}; {0, 0, 9, 0, 5, 10, 10, 10, 3, 11, 5, 3}, {-4, 6, 1, 2, -4, 4, -3, -1, 2, -1, 0, 0}; {-1, 5, -4, 6, 1, 6, 4, -4, -3, 3, 0, 0}; {0, 0, 9, 2, 3, 1, 9, 1, 10, 5, 6, 9}; {3, 3, 0, 5, -5, 4, -3, 2, 1, 6, 0, 0}; {-5, 2, 6, -5, -4, -2, 4, -3, 5, 3, 0, 0}; {0, 0, 9, 3, 10, 3, 4, 1, 4, 9, 10, 1}; {-5, 4, -2, 2, -3, -1, 3, 3, -1, -2, 0, 0}; {-2, -3, 5, -1, -2, 3, -4, 3, -5, 0, 0, 0}; {6, 5, 1, -5, -5, 0, 5, 1, 6, -1,0, 0}; {5, 4, 0, -5, 3, -4, 2, 5, -4, 0, 0, 0}; {-1, 6, -2, 1, ~3, -2, -5, 4, -5, -5, 0, 0}; {0, 0, 9, 5, 10, 0, 5, 1, 6, 6, 8, 4}; {3, -2, 2, 5, 5, 5, 6, 1, 6, 4, 0, 0}; {0, 0, 9, 5, 11, 11, 0, 4, 8, 3, 6, 7}; {-4, 3, -5, -1, -5, -4, 6, 4, -5, -5, 0, 0}; {3, -5, -4, -3, 3, -2, -5, 5, 0, -3, 0, 0}; {0, -5, -1, 4, 4, 0, 3, 1, -3, -3, 0, 0}; {0, 5, -5, -2, -1, -3, -4, 3, -3, 3, 0, 0}; {0, 0, 9, 8, 2, 5, 0, 6, 7, 11, 9, 2}; {-2, -2, -5, 6, 0, 5, -1, 4, -3, -3, 0, 0}; {2, -2, 3, -2, 4, 5, 2, 2, 5, 5, 0, 0}; {3, -3, 0, 6, 5, 1, 4, 1, -3, -2, 0, 0}; {2, -2, 3, -1, 6, 5, 1, 2, -4, -1, 0, 0}; {-5, -1, 0, 4, -2, 5, 2, 2, -2, 2, 0, 0}; {4, -5, -5, -1, 4, -1, 2, 0, -2, 5, 0, 0}; {1, 3, 2, 6, 0, -5, -1, -1, 5, 3, 0, 0}; 5, 2, 6, 3, 4, 6, -1, 0, -3, 6, 0, 0}; {6, -3, -2, 3, -3, 4, -3, -2, 6, 2, 0, 0}; {-4, 0, 2, -3, 3, 0, 4, 6, 3, 1, 0, 0}; {0, 0, 10, 1, 8, 1, 4, 5, 10, 10, 4, 1}; {-4, 2, 6, 3, 4, 6, -1, 0, -3, 6, 0, 0}; > {3, -2, 3, 2, -3, 2, 4, 5, -5, 1, 0, 0}; {0, 0, 10, 2, 3, 8, 9, 10, 6, 1, 7, 0}; {2, -4, 0, -2, 6, 6, 1, -4, -2, 0, 0, 0}; {-1, -1, -3, 1, -5, 4, 1, -1, 5, -3, 0, 0}; {1, -4, 1, 0, 2, -2, 2, 5, -5, 4, 0, 0}; {4, -1, 4, 4, -1, 0, -4, 5, -2, 0, 0, 0}; {4, 0, 6, -5, 4, -5, -1, 4, 3, -2, 0, 0}; 11, 6, -3, -4, 2, 6, 2, -1, -2, 2, 0, 0}; {3, -1, 5, -5, 6, -1, 2, 1, 0, 4, 0, 0}; {0, 5, -4, -4, 1, 6, 1, -2, -3, 2, 0, 0}; {0, 0, 10, 5, 5, 10, 3, 9, 10, 10, 2, 9}; {5, 3, -1,4, 4, -1, 4, -5, 5, ~2, 0, 0}; {3, 0, -5, 0, -5, -2, 1, 0, 3, 4, 0, 0}; {1, -1, -5, 2, -4, -3, -2, 4, -4, 0, 0, 0}; {0, 0, 10, 7, 3, 8, 3, 7, 6, 8, 11, 4}; {-3, 4, -3, 1, 5, 2, -1, 0, -2, -4, 0, 0}; {-3, 6, 1,-5, 1, 1, -1, 2, 5, - 1, 0, 0}; 5, -3, -1, 1, -2, 5, 2, 3, 0, 4, 0, 0}; -5, 4, -1,6, -3, 6, 5, 3, -5, -2, 0,0}; {1, 0, -3, -4, 1, 5, -2, 5,-2, -3, 0, 0}; {0, 0, 10, 11, 0, 2, 6,, 10, 8, 3, 10, 3}; {-2, 4, -4, 3, -4, -5, -1, -1, 3, 3, 0, 0}; {-4, 2, -5, 2, -3, 6, 5, -2, 0, 2, 0, 0}; {-1, 6, 0, -4, -4, 2, 6, -4, -2, 1, 0, 0}; {0, 0, 11, 1, 3, 9, 8, 5, 1, 6, 0, 8}; {6, 1, -5, 4, 4, -1, 3, -5, -4, 0, 0, 0}, {-4, 2, -5, 3, 4, 6, 0, 0, -3, -5, 0, 0}; {0, 0, 11, 4, 1, 7, 8, 1, 3, 9, 0, 9}, {-1, 4, -4, -5, 1, 4, 2, -1, -3, 2, 0, 0}; {-1, 1, 2, -2, 2, -1, 3, -3, 6, 5, 0, 0}; {0, 0, 11, 6, 1, 0, 4, 7, 10, 5, 8, 4}; {-5, 2, -4, -2, 1, 3, -3, 5, 1, 1, 0, 0}; {-5, 3, -2, 1, -4,-1, 3, 3, -1, -2, 0, 0}; {-4, 4, -1, 3, -2, 1, 3, 2, 4, 5, 0, 0}; {3, -3, 2, 4, -3, 5, 3, 4, -1, -2, 0, 0}; {0, 0, 11, 7, 8, 4, 11, 10, 2, 2, 9, 2}; {5, 2, -2, 3, 1, 1, -4, -2, 5, -3, 0, 0}; {6, 3, -1, 5, -5, 3, 6, 5, 5, -2, 0, 0}; {1, -4, 2, 6, -4, 3, 1, 0, -2, -3, 0, 0}; {-5, 4, 0, -5, --5, 5, -5, 2, 5, -2, 0, 0}; {2, -1, -5, 2, 6, 3, 2, 2, -5, -2, 0, 0}; {0, 0, 11, 9, 4, 9, 3, 9, 3, 4, 8, 8}; {5, 1, -4, 2, -4, -1, 1, 0, 3, 4, 0, 0}; {6, 0, 5, -3, 5, 5, 5, 3, -3, -4, 0, 0}; {-5, 1, 6, 0, -4, 5, 5, -3, 0, 1, 0, 0}; {2, -2, 5, 1, 2, -3, 1, 6, -4, - 1, 0, 0 };und {1, -4, 2, -3, -1, -2, -3, 0, 5, 6, 0, 0} ;und

10, 0, 0, 0, 3, 6, 0, 10, 6, 3, 8, 1}; {0, 0, 1, 3, 3, 9, 6, 2, 4, 11, 2, 9}; {0, 0, 3, 0, 9, 4, 3, 3, 9, 1, 8, 0}; {0, 0, 3, 1, 10, 11, 8, 2, 6, 1, 2, 7 }; {0, 0, 3, 1, 11, 6, 7, 1, 4, 11, 7, 11}; {0, 0, 3, 6, 10, 8, 8, 3, 11, 9, 0, 8}; {0, 0, 3, 7, 1,4, 7, 6, 4, 0, 5, 2}; {0, 0, 4, 8, 8, 3, 9, 0, 7, 1, 10, 10}; {0, 0, 6, 5, 3, 5, 1, 5, 1, 8, 1, 2}; {0, 0, 6, 6, 1, 3, 4, 4, 5, 0, 6, 0}; {0, 0, 6, 8, 1, 3, 1, 4, 9, 5, 11, 8}; {0, 0, 7, 8, 8, 6, 2, 9, 6, 10, 3, 9}; {0, 0, 7, 8, 10, 9, 11, 2, 9, 1, 8, 4}, {0, 0, 8, 4, 4, 9, 3, 0, 5, 11, 2, 2}; {0, 0, 8, 5, 7, 10, 2, 10,0, 11, 4, 11}; {0,0, 8, 6, 9, 3, 11, 3, 4, 0,4, 5}; {0, 0, 9, 1, 3, 9, 9, 9, 3, 0, 5, 0}; {0, 0, 10, 0, 7, 11, 7, 4, 11, 11, 2, 5}; {0, 0, 10, 11, 2, 7, 8, 2, 10, 2, 8, 4}; und {0, 0, 11,6, 5, 0, 8, 1, 0, 4, 10, 1}; und

Abbilden (S102) der Sequenz {$f_n$} auf N Unterträger, um ein erstes Signal zu erzeugen und zu senden.

2. Signalverarbeitungsverfahren nach Anspruch 1, wobei das Abbilden der Sequenz {$f_n$} auf N Unterträger Folgendes umfasst:

entsprechendes Abbilden der N Elemente in der Sequenz {$f_n$} auf N aufeinanderfolgende Unterträger; oder
entsprechendes Abbilden der N Elemente in der Sequenz {$f_n$} auf N gleichmäßig beabstandete Unterträger.

3. Sequenzbasiertes Signalverarbeitungsverfahren, wobei das Signalverarbeitungsverfahren Folgendes umfasst:
Empfangen (S103) eines ersten Signals, das auf N Unterträgern transportiert wird, und Erlangen von N Elementen in einer Sequenz {$f_n$}, wobei $f_n$ ein Element in der Sequenz {$f_n$} ist, die Sequenz {$f_n$} eine Sequenz ist, die eine voreingestellte Bedingung erfüllt, die voreingestellte Bedingung $f_n = A \cdot x_n \cdot e^{2\pi j \cdot \alpha \cdot n}$ ist, ein Wert von n von 0 bis N-1 reicht, A eine komplexe Zahl ungleich Null ist, $\alpha$ eine reelle Zahl,

$j = \sqrt{-1}$ , für ein Element X$_n$, $x_n = u \cdot e^{2\pi j \cdot s_n/M}$, M=12, ist, u eine komplexe Zahl ungleich Null ist und eine Menge, die aus einer Sequenz {$S_n$} besteht, die aus einem Element $S_n$ besteht, mindestens eine der Sequenzen in einer ersten Sequenzmenge umfasst, wobei die Sequenzen in der ersten Sequenzmenge einige oder sämtliche der folgenden Sequenzen umfassen:

{-2, 4, -2, 4, 0, 2, 2, 0, 5, 5, 0, 0}; {-1, 6, 1, -4, -2, 4, -5, -5, 6, -5, 0, 0}; {3, -3, 3, -3, 0, -2, -2, 0, -5, -5, 0, 0}. {2, -,4, 2, -4, -1, -2, -2, -1, -5, 6, 0, 0}; {-4, 2, -4, 3, -1, 1, 2, 1, 4, 5, 0, 0}; {0, 6, 0, -5, -2, -4, -3, -1, 6, 6, 0, 0}; {0, 6, 0, -5, -2, -3, -3, --1, 6, 6, 0, 0}; {-1, 5, -1, 6, 2, -3, -3, -1, 5, 5, 0, 0}; {-4,2, -4, 4, -4, -5, -4, -2, 5, 5, 0, 0}; {-5, 1, -5, 3, -5, 6, -5, -3, 5, 5, 0, 0}; {4, -2, 4, 0, -4, -1, 0, -1, 3, 4, 0, 0}; {0, 4, -4, 2, -3, -2, -3, 4, 1, -2, 0, 0}; {-1,3, -5, 1, -4, -3, -3, 4, 1, -2, 0, 0}; 0, 5, -2,. 5, 2, 4, 3, 1, -3, -4, 0, 0}; {-3, 1, 5, -1, -5, -4, -5, 3, 0, -3, 0, 0}; (3, -3, 3, -1, 0, 6, -3, -3, -5, -4, 0, 0}; {1, 6, -1, 6, 6, 0, 2, 0, -3, -1, 0, 0}; {5, -2, 3, -2, 0, 1 0, 0, -5, 6, 0, 0}; {-3, 3, -3, 5, -4, -4, -4, -2, 5, 5, 0, 0}; {-3, 0, 3, -3, 3, 1, 3, -5, 4, 1, 0, 0}; {-1, 4, -3, 5, 4, -2, 1, 0, - 3, -2, 0, 0}; {3, -1, -5, -5, 1, -4, 0, 1, 4, -1, 0, 0 }; {2, -2, 6, 6, 1, -5, 0, 1, 4, -1, 0, 0}; {0, - 5, -2, -2, -5, 1, 4, 4, 6, 1, 0, 0}; {1, -3, 5, 6, 0, -5, {-1, 1, 3, -{-1, 0, 0}; {-3, 4, -1, -1, 5, -1, 3, 4, 5, 0, 0, 0};{-5, 1, -5, 6, -1, 4, -5, -5, -5, 1, 0, 0}; {-2, 5, 0, 0, 6, 0, 3, 4, 5, 0, 0, 0}; {-5, 1, -5, 6, -1, 5, -5, 6, -5, 1, 0, 0}; {3, -3, 3, 3, --4, 2, 5, 5, 6, 0, 0, 0}; {-3, 3, 3, -3, -3, 4, -2, -5, -5, 6, 0, 0, 0}; {4, -3, 2, 2, -4, 1, -2, -3, -5, 0, 0, 0 }; {5, -1, 6, 1, -5, 5, 6, 5, -1, 0, 0}; {5, -1, 5, 6, 1, -4, 5, 5, 5, -1, 0, 0}; {3, -4, 1, 1, -5, 1, -3, -4,-5, 0, 0, 0}; {-1, 3, -5, 6, 0, 5, 1, -1, -3, 1, 0, 0}; 0, 5, -2, -2, 5, -1, -4, -4, 6, -1, 0, 0}; {-2, 2, 6, 6, -1, 5, 0, --], -4, 1, 0, 0}; {-2, 2, 6, 6, 0, 5, 1, -1, -3, 1, 0, 0); {-3, 1, 5, 5, -1, 4, 0, -2, -4, 1, 0, 0}; {-3, 1, 5, 5, -1, 4, 0, -1, -4, 1, 0, 0}; {-2, 3, -4, -3, 4, -2, -5, -5, 6, -1, 0, 0}; {3, 0, -3, 3, -3, 5, -4, -1, 0, 0}; {4, -2, 4, -4, 4, 5, 4, 2, -5, -5, 0, 0}; {-5, 2, -3, 2, 0, 1, 0, 0, 5, 6, 0, 0}; {-1, 5, -1, 3, 5, 1, 1, 6, 5, {-1, 0, 0}; {0, -5, -2, -5, -2, -4 . ..... 3, {-1, 3, 4, 0, 0}; {4, -2, 4, -3, 6, 6, 4, 3, .... 5, .....5, 0, 0}; {2, -4, 2, -5, 4, 5, 3, 2, -5, -5, 0, 0}; {-3, 3, -3, 2, 0, -5, 4, 3, -1, 0, 0, 0}; {0, 6, 0, 5, 3, 4, 3, 1, 6, 6, 0, 0}, {6, 0, 6, -1, -2, 0, .... 1, 0, -4, -5, 0, 0}; {-4, 4, 1, -4, -4, 0, 4, 0, 3, -1, 0, 0 {-1, 5, 0, 5, 3, 3, 2, 1, 6, -5, 0, 0}; {-3, 2, -4, 0, -2, -4, -5, 4, -4, -4, 0, 0}; I-1, 6, -2, -4, -2, -3, 4, -5, -1, 2, 0, 0}; {5, -2, 4, -3, 5, 6, 5, 3, -5, -5, 0, 0}; {-1, 5, 0, 6, -3, -4, -4, -2, 6, 6, 0, 0}; {-5, 1, -4, 3, -5, 6, -5, -3, 5, 5, 0, 0}; {5, -3, 2, -5, -3, 6, 3, -4, 6, 0, 0, 0}; {3, -5, 0, 5, -4, 5, 2, -5, 5, 0, 0, 0}; {0, 5, -1, 5, 5, -2, -2, 2, 2, -2, 0, 0}; {-5, 0, 6, 0, 2, 0, 0, 1, -4, -5, 0, 0}; {-4, 1, -5, 3, -5, 6, -4, -3, 5, 5, 0, 0}; {-3, 1, 6, 1, -5, -4, -4, 3, 1, -2, 0, 0}; {6, -3, 1, --5, 1, 0, 1, 6, 3, 0, 0, 0}; {-5, -1, 4, 0, 3, -3, -4, 2, 0, -2, 0, 0}; {5, 0, -4, -4, 2, -3, 1, 2, 4, -1, 0, 0}; {3, -2, 6, 6, 1, -4, 0, 1, 4, -1, 0, 0}; {-1, 5, 0, 0, 5, 0, 4, 4, 5, 0, 0, 0}; {5, -1, 6, 6, -1, -2, 4, 6, 2, 0, 0, 0}; {-1, 5, 0, 0,6, 0, 3, 4, 5, 0, 0, 0}; {-1, 4, -2, -2, 4, -1, -4, -4, 6, - 1, 0, 0}; {-5, -1, 4, 3, -3, 3, -1, -2, -4, 0, 0, 0}; {-3, 1, 6, 5, -1, 4, 0, -2, -3, 1, 0, 0}; {-2, 3, -3, -3, 4, -2, -5, -5, 6, -1, 0, 0}; {-5, -1, 4, 3, -2, 3, -1, -2, -4, 0, 0, 0}; {-4, 1, -5, -5, 3, -3, 6, 6, 6, -1, 0, 0}; {6, -2, 3, 2, -3, 2, -1, -3, -4, 0, 0, 0}; {3, 6, -2, -3, 3, -5, 3, 1, -2, 2, 0, 0}; {-5, {-1, 4, 4, -3, 3, -1, -2, -4, 1, 0, 0}; {6, -2, 3, 3, -3, 3, -1, -2, -4, 0, 0, 0}; {5, -3, 2, 2, -4, 2, -2, -3, -5, 0, 0, 0}; {5, 1, -2, 4, -2, 0, -3, 6, -4, -1, 0, 0}; 3, -2, 6, -1, 4, 5, 1, -2, -2, 0, 0, 0}; {5, -1, -5, -1, 1, 3, -3, 3, 3, 1, 0, 0}; {4, 1, 0, -5, 1, 6, 2, -2, 5, -3, 0, 0}; {3, -1, -3, 3, -3, -1, 6, -4, -5, -1, 0, 0}; {1, -3, -5, -1, -5, -2, 6, -5, 6, -3, 0, 0}; {2, -5, 2, -5, 4, 5, 3, 2, -5, -5, 0, 0}; {-1, 3, -3, 1, 0, 4, 1, -5, 6, -2, 0, 0}; {-2, 2, -4, 0, -1, 3, 1, 6, 5, 3, 0, 0}; {5, -1, -5, 2, -5, -1, 3, 5, 4, 4, 0, 0}; {5, -1, -5, 2, -5, -1, , 3, 6, 5, 4, 0, 0}; {0, 4, -2, 3, 6, 4, 0, 6, 4, 0, 0, 0}; {-3, 3, {-1, 6, -5, -2, -4, -2, 3, 3, 0, 0}; {-4, -1, 4, -3, - 1 , -5 3, -4, 5, 0, 0, 0}; {-5, -2, 3, -4, -2, -5, 4, -4, 6, 0, 0, 0}; {0, 4, -2, 4, -2, -3, -1, -1, 4, 3, 0, 0}; {6, -3, -2, -5, 4, -5, -5, -3, 6, 3, 0, 0}, {6, -2, 4, -2, -4, 1, 0, 4, 4, 2, 0, 0}; {6, -2, 4, -2, -3, 2, 1, 5, 4, 2, 0, 0}; {4, -3, 4, 0, 0, 6, -5, -1, 1, -1, 0, 0}; {-1, 2, -5, 1, 0, 4, 6, 5, 3, 0, 0}; {3, 5, -3, -2, 3, -1, 6, -1, -5, 1, 0, 0 1; {-2, 1, 6, 0, -5, -4, -2, -2, 4, 2, 0, 0}; {-3, 2, -3, 6, -3, 3, 4, -1, -2, -3, 0, 0}; {1, 3, -5, 1, 2, -3, 4, -3, 5, 0, 0, 0}; {0, -2, 6, 0, 1, -3, 4, -3, 5, 0, 0, 0}; {-3, -1, 3, -2, 6, -2, -5, -3, -5, 5, 0, 0}; {0, 3, 4, -5, 1,6, 1, 0, -3, 1, 0, 0}; {-4, 3, 0, 4, -4, -3, 4, 0, 0, -1, 0, 0}; {-4, 4, 2, -5, 0, 3, -2, -5, -2, 0, 0, 0}; {-5, 3, 1, 6, -1, 2, -2, -5, -2, 0, 0, 0}; {5, 1, 0, 5, -2, 2, -3, 6, -2, 0, 0, 0}; {-4, 4, -3, 3, -5, 4, 5, 5, -4, 0, 0}; {4, -1, -3, 3, -3, -1, -5, --4, 6, -2, 0, 0}; {-1, 5, 2, -4, -4, 1, 5, -1, 1, 0, 0, 0}; {-3, 3, 0, 6, -5, -1, -5, -2, 3, 2, 0, 0}; {2, 6, 1, 6, 6, -1, -2, 4, 3, 1, 0, 0}; {-1, 2, -4, 0, 0, 4, 2, -5, 5, -2, 0, 0}; {-2, 4, 1, -4, 3, -5, {-1, 4, 4, 3, 0, 0}; {-5, -1, 6, -1, 3, 1, 2, 5, 4, -2, 0, 0}; {4, -4, 3, -4, -5, 0, - 1, 4, 4, 1, 0, 0}; {4, -4, 3, -4, -5, 0, -1, 4, 4, -2, 0, 0}; {2, 5, ....1, 3, 1, 5, 3, -4, 6, 3, 0, 0}; {1, 4, -2, 3, 1, 5, 3, -5, 6, 3, 0, 0}; {3, -4, 4, -1, -1, 5, 6, -1, 1, -1, 0, 0}; {-2, 1, -5, 0, -1, 3, 2, 6, 5, 3, 0, 0}; {-2, 4, 1, -3, 3, -5, 0, 3, 3, 3, 0, 0}; {6, -2, 5, -1, 5, 5, -4, -4, 5, 5, 0, 0}; (5, -3,

4, -2, 5, 5, -5, -4, 5, 5, 0, 0}; {5, -2, 6, 1, 0, 6, -5, 0, 2, 0, 0, 0}; {1, 4, -2, 3, 0, 4, 4, -4, 6, 3, 0, 0}; {0, 2, -5, 0, 1, -3, 4, -3, 5, 0, 0, 0}; {-2, 0, 5, -2, 0, -4, 4, -3 , 6, 0, 0, 0}; {5, -5, 0, 6, 3, --5, 5, -4, 6, 5, 0, 0}; {-5, -2, 4, -1, 5, -4, -5, 3, 0, -2, 0, 0}; {-3, -1, 4, 2, -4, -1, 6, 1, 0, 4, 0, 0}; {5, -5, {-1, -1, 2, -3, 4, -1, -1 , 3, 0, 0}; {-2, -5, -4, 2, -3, 2, 0, 2, 3, -5, 0, 0}; {0, -5, 6, -1, 3, 6, 1, -3, -1, -1, 0, 0}; {5, 0, -1, 5, 5, -3, 3, -2, 1, 0, 0, 0}; {1, -4, -5, 1, 3, -5, 1, -3, 0, -1, 0, 0}; 5, 2, 1, -5, -2, 3, 3, 6, -2, 0, 0, 0}; {0, 6, 4, -2 , -4, 1, 5, -1, 1, 1, 0, 0}; {-1, 4, 1, -5, -3, 3, 4, -1, 0, -2, 0, 0}; {-2, 4, 2, -3, 1, 5, 4, 5, -1, 2, 0, 0}; {-3, -1, 5, --2, -1, -5, 3, -4, 5, -1, 0, 0}; {-5, -3, 3, -4, -2, 6, 1, -5, 4, -1, 0, 0}; {6, -5, 0, 4, 5, 0, -5, -1, -5, 1, 0, 0}; {0, 4, 0, -5, -1, 4, 5, 1, -1, -3, 0, 0}; {2, -3, -3, 3, 5, 1, -4, 1, -2, -1, 0, 0}; {-3, 3, 2, -4, -3, 5, -1, 3, 0, 0, 0, 0}; {-4, 2, 1, -5, -4, 4, -2, 2, 0, 0, 0, 0}; {-3, -1, 6, -4, 6, -2, 5, -1, -4, 5, 0, 0}; {1, -4, -4, 3, 2, 6, 0, -3, 0, -1, 0, 0}; {-1, 5, 4, -2, -4, 0, 5, 0, 2, 1, 0, 0}; {0, -5, -5, 2, 1, 6, 0, -4, -1, -1, 0, 0}; {-1, 6, 6, 1, 1, 6, 0, -4, -1, -1, 0, 0}; {-4, 2, 1, -5, 6, -1, 3, -2, 1, 0, 0, 0}; {-3, 4, 4, -1, -1, 5, -2, 6, -2, -2, 0, 0}; {-4, 3, 3.- 2, -2, 4, -2, 6, -2, -1, 0, 0}; {-4, 3, 3, -2, -1, 4, -2, -5, -1, -1, 0, 0}; {-5, 1, 0, 6, 6, -2, 4, -1, 1, 0, 0), 0}; {-4, 3, 3, -2, -1, 4, -1, -5, -1, -1, 0, 0}; {3, 5, 0, 3, -4, 4, 2, -5, 5, -1, 0, 0 }; {-3, 3, 2, -3 -3, 6, -3, 3, 0, 1, -1, 0, 0}; {1, 4, 0, -5, -1, 4, 5, 1, -1, -4, 0, 0}; {-3, -2, 4, -2, -1, -5, 2, -5, 4, -1, 0, 0}; {-4, 2, 2, -5, -3, 4, -2, 3, 0, 0, 0, 0}; {5, -3, -5, -1, -3, 4, -4, -3, 5, 4, 0, 0}; {-5, 3, 5, 1, 3, -4, 4, 3, -5, -4, 0, 0}; {6, 0, 0, 6, -5, 3, -2, 2, -1, 0, 0, 0}; {6, 0, 0, 6, -5, 3, -2, 3, -1, 0, 0, 0}; {-4, 2, 2, -4, 6, -2, 4, -1, 1, 1, 0, 0}; {-5, 1, 1, -5, 5, -3, 3, -2, 1, 1, 0, 0}; {6, 0, 0, 6, 5, -3, 2, -2, 1, 0, 0, 0); {6, 0, 0, 6, 5, -3, 3, -2, 1, 0, 0, 0}; (4, -2, -2, 5, 3, -4, 2, -3, 0, 0, 0, 0}; {6, 3, -5, 2, -4, 6, 5, 3, 6, -5, 0, 0}; {-3, -5, 0, -3, 4, -4, -2, 5, -5, 1, 0, 0}; {-4, 3, 5, -1, -5, 2, 6, -5, 0, 0, 0, 0}; {4, -2, -1, 5, 4, -4, 2, -2, 0, 0, 0, 0}; {-1, 4, 4, -3, -2, 6, 0, 3, 0, 1, 0, 0}; {0, -5, -3, 4, -4, 5, 1, -5, -5, -2, 0, 0}; {5, -2, -2, 3, 0, 4, -4, 3, 1, 2, 0, 0}; (0, 6, -5, 2, 0, 5, 0, -4, -1, 0, 0, 0}; {-2, 3, 3, -3, -5, -1, 4, -1, 2, 1, 0, 0}; -3, -4, -4, 2, -2, 1, -5, 3, 1, 1, 0, 0}; {2, -4, -3, 4, 1, 6, 1, -3, -1, 0, 0, 0}; {0, 4, 3, -4, 3, 6, -1, 6, 4, 2, 0, 0}; {-5, 5, -1, 1, -2, 3, -4, 1, 1, -3, 0, 0}; {-1, -3, 3, -4, 6, 3, -2, 0, -5, -1, 0, 0}; {-4, 4, -4, 1, -5, -4, 6, 4, -5, -5, 0, 0}; {6, 5, 0, -4, -5, 0, 5, 1, 5, -1, 0, 0}; {5, 3, -3, 4, 2, 6, -1, 5, -4, 1, 0, 0}; {3, 1, -5, 2, 1, 5, -3, 4, -5, 1, 0, 0}; {4, -1, 2, -5, 0, -1, -3, -5, -4, -3, 0, 0}; {3, -2, 1, -5, 1, 2, -4, 6, -5, -3, 0, 0}; {-4, 1, 2, -5, -4, 4, -2, 5, 0, 1, 0, 0}; {2, -4, -2, 4, 0, 5, -3, -3, 1, -1, 0,0}; {5, -2, -1, 1, 5, 2, - 3, 3, 6, 2, 0, 0, 0}; {2, 5, 4, -2, 3, -2, 0, -2, - 3, 5, 0, 0}; {-5, -1, 0, -5, 2, -2, 3, 6, 2, 0, 0, 0}; {3, 1, -4, -2, -4, 1, 6, -1, 0, -4, 0, 0}; 2, -1, 5, -2, -5, 5, 0, 1, -4, -1, 0, 0}; {2, 0, -5, 2, 0, 4, -4, 3, 6, 0, 0, 0}; {0, -2, 5, 0, -1, 3, -4, 3, -5, 0, 0, 0}; (4, -1, 3, -4,

2, -1, -4, 6, -5, -4, 0, 0}; {2, -4, -1, 3, -3, 5, -3, -3, -3. 0, 0}; {4, -2, 1, 6, 0, -1, -3, -5, -4, -3, 0, 0}; | 1. 5, -4, 1, -5, 3, -1, -4, -4, -3, 0, 0}; {-2, 4, 5, 0, 6, 2, -1, -4, -4, -3, 0, 0}; {3, -3, 0, 6, 5, 1, 5, 2, -3, -2, 0, 0}; {5, 2, -4, 5, 1, 5, -4, 4, 6, 0, 0, 0}; {3, 3, 0, 1, -5, 0, 6, 2, -4, -4, 0, 0}; {4, -4, -3, 3, -3, 5, -4, -5, -5, 4, 0, 0}; {-1, 3, 5, -1, 5, 2, 6, 5, 6, 3, 0, 0}; {-3, 1, 3, -3, 3, 1, 6, 4, 5, 1, 0, 0}; {-4, -1, 0, 5, -1, 6, -2, -2, -5, 3, 0, 0 {-5, .....1, 1, -4, 2, -1, 3, 6, 4, 1, 0, 0}; {5, -3, -1, 6, 1, -2, 2, 5, 2, 0, 0, 0}; {4, -4, -2, 5, 0, -3, 2, 5, 2, 0, 0, 0}; {4, -3, 0, -4, 4, 3, -4, 0, 0, 1, 0, 0}; {4, -2, 2, -1, -1, 6, -1, -3, -5, -4, 0, 0}; {0, -3, 4, 5, -1, 6, -1, 0, 3, -1, 0, 0}; {0, -2, 6, 0, -1, 3, -4, 3, -5, 0, 0, 0}; {-1, -3, 5, -1, -2, 3, -4, 3, -5, 0, 0, 0}; {-5, 2, -5, -1, 6, -5, 6, 4, -5, -5, 0, 0}; {-5, 3, -3, 2, 0, 1, 0, 4, 5, 0, 0}; {-3, -5, 3, -2, -3, 1, 6, 1, 5, - 1, 0, 0), {-3, 5, -1, 5, -1, 1, 2, 1, 4, 5, 0, 0}; {-4, 4, -2, 4, -2, 1, 2, 1, 4, 5, 0, 0}; {-5, 3, -3, 3, -2, 0, 1, 0, 4, 5, 0, 0}; {4, -1, 4, -3, 4, 5, 5, 3, 6, 6, 0, 0}; {1, -4, 1, 6, 1, 2, 6, 5, 1, -1, 0, 0}; {2, -3, 2, -5, 3, 4, 4, 2, 6, 6, 0, 0}; {5, 2, -3, 4, 2, 5, 4, 4, 6, 0, 0, 0}; {4, 1, -4, 3, 1, 5, -3, 4, -5, 0, 0, 0}; {-5, 3, -3, 5, 3, , -3, 4, 6, 0, 0, 0}; {-2, 6, 0, -4, 4, -5, -2, 5, -5, 0, 0, 0}; {3, -2, 3, -1, 0, 6, -2, -3, -5, -4, 0, 0}; {0, -5, 0, -4, 1, 3, 2, 1, 5, 5, 0, 0}; -1, 6, 0, -4, 3, 2, 2, -4, -1, 2, 0, 0}; {6, 1, -5, 3, -5, 6, -5, -2, 3, 4, 0, 0}; {-1, 5, -2, 6, -1, 2, 2, 0, 4, 4, 0, 0); {-3, 2, 6, 1, -4, -5, 1, 2, 2, 0, 0, 0}; {-5, -1, 2, -4, 2, 0, 3, 6, 4, 1, 0, 0}; {5, -1 , 4, 1, -2, -3, 3, -4, -2, -1, 0, 0}; {0, -4, 3, 3, -4, -4, 0, 4, 0, 1, 0, 0}; {-5, 3, -2, -2, 4, -2, 2, 3, 5, 0, 0, 0}; {6, 2, -3, -3, 3, -3, 1, 2, 4, 0, 0, 0}; {5, 1, -4, -4, 3, -3, 1, 2, 4, -1, 0, 0}; {6, 2, -3, -2, 3, -2, 1, 3, 4, 0, 0, 0}; {4, -1, 5, 5, -3, 3, 6, 6, 6, 1, 0, 0}; {5, 1, -4, -3, 2, -3, 1, 2, 4, 0, 0, 0}; {5, 1, -4, -3, 3, -3, 1, 2, 4, 0, 0, 0}; {2, -3, 3, 3, -4, 2, 5, 5, 6, 1, 0, 0}; {1, -4, 2,2, -4, 1, 4, 4, 6, 1, 0, 0}; {1, -5, 0, 0, 6, 0, -3, -4, -5, 0, 0, 0}; {-5, 1, 6, 6, 1, 2, -4, 6, -2, 0, 0, 0}; {1, -5, 0, 0, -5, 0, -4, -4, -5, 0, 0, 0}; {-3, 2, 6, 6, -1, 4, 0, -1, -4, 1, 0, 0}; {-5, 0, 4, 4, -2, 3, -1, -2, -4, 0, 0, 0}; 6, 1, 3 3, ..... 2, 3, -1, -3, -4, 1, 0, 0}; {-1, -3, 6, 0, 3, -1, 2, 3, 3, -4, 0, 0}; {6, 3, -1, 5, -1, 0, -1, 6, -3, 0, 0, 0}; {6, 2, -3, 2, -4, -1, 3, 4, -1, -1, 0, 0}; {3, -2, 4, -4, 3, 4, 5, 3, 6, 6, 0, 0}; {4, -1, 5, -3, 5, 6, 4, 3, -5, -5, 0, 0}; {1, -4, 2, 6, 2, 3, 4, 2, 6, 6, 0, 0}; {1, -4, 2, -5, 3, 4, 3, 2, 6, 6, 0, 0}; {-2, 5, -1, 4, 1, 2, 2, 1, 5, 6, 0, 0}; 5, -1, 4, -3, 5, 6, 5, 3, -5, -5, 0, 0}; -5, 3, -2, 5, 3, 6, -3, 4, 6, 0, 0, 0}; {-3, 4, -2, 4, -1, 1, 2, 1, 4, 5, 0, 0}; {-5, 2, -4, 2, -2, 0, 1, 0, 4, 5, 0, 0}; {-3, 5, 0, -5, 4, -5, -2, 5, -5, 0, 0, 0}; {6, 0, 5, -1, -5, -5, 5, 4, -4, -4, 0, 0}; {2, -4, 1, -5, 3, 4, 4, 2, 6, 6, 0, 0}; {2, -4, 1, -5, 4, 4, 4, 2, 6, - 5, 0, 0}; {-1, 6, 0, - 5, -2, -4, -3, -1, 5, 5, 0, 0}; {-1 , 6, 0, -5, -2, -3, -3, -1, 5, 5, 0,0}; {-4, 3, -3, 4, -4, -5, -4, -2, 5, 5, 0, 0}; {-5, 2, -4, 3, -5, 6, -5, -3, 5, 5, 0, 0}; {-5, 2, -4, 3, -4, -5, -5, -1, 2, 4, 0, 0}; und {-2, 5, - 1, 6, -1, 2, 3, 1, 4, 5, 0, 0},

{-3, 2, -5, 0, -1, -3, -5, 5, -4, -4, 0, 0}; {6, 0, 6, 0, 4, -5, -4, 2, 0, -2, 0, 0}; {0, 0, 0, 1, 10, 8, 5, 0, 4, 9, 10, 2}; {1, -5, 1, -3, -5, -1, -1, 6, -5, 1, 0, 0}; {-4, 1, 6, 1, -2, 6, 0, 2, 4, 3, 0, 0}; {-3, 1, 5, 0, -5, -3, -4, 3, 0, -2, 0, 0}; {4, 5, 6, -2, 3, -1, 4, -1, -2, 4, 0, 0}; {-4, -1, 2, -4, 6, -2, -4, -5, -4, 3, 0, 0}; {-2, 3, -4, 4, 5, 6, 1, 1, -3, -5, 0, 0}; {0, 0, 0, 4, 8, 11, 9, 6, 10, 5, 0, 11}; (2, -4, 2, 1, 6, 4, -5, -1, 3, 1, 0, 0}, {5, 3, 1, 5, 1, 3, -2, 5, 6, -3, 0, 0}; {4, 6, 4, 4, -3, 6, 0, 6, 6, 3, 0, 0}; {-4, 0, 4, 3, -2, 3, -1, -2, -5, 0, 0, 0}; {-5, -5, -5, 2, 6, -2, 6, 4, -3, 6, 0, 0}; {-2, -4, 6, 0, 5, -3, -5, 3, -4, -1, 0, 0}; {1, -2, -5, 0, 5, 0, 3, 2, 4, 6, 0, 0}; {2, -3, 4, -4, -5, 6, -1, - 1, 3, 5, 0, 0}; {4, 0, -4, 2, 1, 4, -4, 3, 5, 0, 0, 0}; {3, -2, 5, -2, 0, -2, -3, 3, 3, -2, 0, 0}; {5, -1, 5, -2, 0, 0, -1, 0, -4, 6, 0, 0}; {6, 1, -3, 3, -4, 0, 4, 6, 6, 5, 0, 0}; {6, 0, -5, 1, 0, 2, 0, 0, 5, 5, 0, 0}; {-1, 6, 2, -2, 3, -4, 0, 3, 3, 3, 0, 0}; {-1, 5, 0, -5, 3, 2, 2, -5, -2, 1, 0, 0}; {1, 6, 0, -5, 4, -2, 0, 3, 3, 3, 0, 0}; {0, 0, 1, 3, 11, 7, 11, 4, 5, 0, 0, 7}; {6, -3, 1, -5, -2, -5, 3, -4, 6, 1, 0, 0}; {0, 2, 5, -2, 5, 3, 3, -3, 4, 0, 0, 0}; {-4, 1, -5, 4, -4, -5, -4, -2, 5, 4, 0, 0}; {2, 4, -5, 1, 5, 0, -5, 5, 3, -1, 0, 0}; {0, 0, 1, 5, 9, 2, 10, 3, 0, 8, 4, 4}; {-2, -1, 1, -5, 3, 6, 2, 0, -1, 6, 0, 0}; {0, 0, 1, 6, 3, -1, 4, 6, 1, 5, 0, 0}; {-5, 1, -4, -5, 1, 5, -5, -5, -4, 2, 0, 0}; {1, -5, 2, 1, 5, 0, 1, -3, -5, -4, 0, 0}; {-4, 0, 5, 2, -3, -4, 4, -2, 1, 1, 0, 0}; 0, 0, 1, 6, 11, 3, 10, 7, 4, 11, 2, 1}; {5, -1, 6, 6, 5, 2, -5, 4, 6, -4, 0, 0}; {-2, -5, 5, -4, 4, 6, 1, 6, -4, -4, 0, 0}; {-4, 3, -1, 0, 6, 6, -1, 3, -1, -1, 0, 0}, {0, 0, 1, 9, 0, 1, 6, 1, 8, 8, 5, 0}; {0, 0, 1, 9, 2, 5, 4, 8, 5, 1,0, 6}; {-1, -5, 4, -4, 3, 5, 0, 6, -5, -1, 0, 0}; {0, 0, 1, 10, 1, 8, 11, 3, 2, 8, 7, 2}; {2, -4, 3, -5, -5, 5, -2, 0, 4, 4, 0, 0}, {2, -4, 3, -5, -5, 5, -1, 0, 3, 4, 0, 0}; {0, 0, 2, 0, 8, 9, 6, 10, 3, 9, 9, 2}, {-3, 1, -5, -2, -2, 3, -1, 6, 5, 1, 0, 0}; {3, -4, 3, -4, 5, 5, 2, 2, -4, -3, 0, 0}; {-1, 0, 3, 4, -1, -5, 2, -5, 2, 3, 0, 0}; {-5, 0, -5, 1, 3, -4, -4, 2, 1, 0, 0, 0}; {4, -5, 0, 4, 2, 6, 3, -4, 6, 4, 0, 0}; {0, 4, -2, 4, -3, -4, -1, -2, 6, 5, 0, 0}; {5, -4, 1, 6, 1, -1, 1, 0, 6, 3, 0, 0}, {-1, 6, 3, 1, 6, -1, -2, 0, -5, -1, 0, 0}, 3, 6, -1, 5, 0, -2, 0, -2, -4, -5, 0, 0}, {3, -3, 5, 2, 2, -3, 1, -5, -3, -1, 0, 0}; (4, -5, 0, -5, -4, 0, 2, 1, 5, 1, 0, 0) {-3, 0, 5, 0, -5, -3, -5, 3, 0, -2, 0, 0}; {0, 0, 2, 7, 6, 4, 11, 8, 5, 9, 4, 7}; {-3, 0, 5, 2, -5, 3, -1, -2, 2, 2, 0, 0}; {-1, -1, 1, -4, 6, -3, 3, -2, -1 , 5, 0, 0}; 3, 6, --1, -2, -5, 3, 1, -2, 2, 0, 0}, {3, -1, -3, 1, 2, 5, 3, -5, 1, 4, 0, 0}; {0, 0, 2, 10, 4, 0, 11, 9, 6, 0, 3, 5}; {4, -2, 6, -3, -4, 6, 1, 0, 3, 6, 0, 0}, {-1, 0, 3, 1, 0, -5, -2, 5, 1, 6, 0, 0}; {0, 0,2, 11, 10,4, 6,9, 3, 8, 2, 9}; {0,0,2, 11, 11, 5, 6,2, 5, 10, 6, 1}; {-- 5, ~2, 4, 4, -2, 3, 0, -2, -4, 0, 0, 0}.; {6, 6, -3, -5, 3, -2, 2, -4, 3, 5, 0, 0}; {0, -4, -5, 1, -5, -2, 5, -4, -5, -1, 0, 0}; {-4, 4, 3, -2, 1, 5, -1, -4, -], -2, 0, 0}, {2, -5, 3, -4, 3, 3, 6, 5, 4, 5,0,0}; {0, 0, 3, 3,. 7, 1, 5, 3, 1, 11,7, 11}; {0, 0,3,3, 11,8,5,7,3,6, 11, 4}; {1,6, 2, -4, -2, 0, -2, -1, 4, 3, 0, 0}; {0, 0, 3, 4, 11, 1, 7, 10, 5, 11, 6, 3); {2, -2, -3, -5, 0, 5, -4, -4, 1, -3, 0, 0}; {-3, 5, 4, 3, -3, 2, 5, -5, 0, -3, 0, 0}; {0, 0, 3, 6, 5, 2, 7, 4, 3, 1, 7, 0}; {-3, 1, -4, 3, 6, -2, -3, 5, 1, -1, 0, 0;.; {-1, 2, -4, 2, -4, 6, 1,2, -2, -2,0, 0}; {-1, 2, -4, 2, -4, -4, -1, -2, 4, 2, 0, 0}; {0, 0, 3, 8, 2, 2, 9, 7, 6, 2, 6, 3}; {0, 0, 3, 8, 10, 7, 4, 3, 8, 4, 8, 6}; {3, 2, 4, --- 3, 6, -1, 5, 0, 1, 5, 0, 0}; {2, 1, 3, -4, 5, -2, 5, 0, 1, 5, 0, 0}; {-5, 3, 2, 5, 3, 0, 4, -3, 5, 4, 0, 0}; {-3, 0, 6, 5, 0, 2, -4,4, 1, -1, 0, 0} , {0, 0, 4, 0, 6, 1, 9, 7, 6, 2, 5, 8}; {-2, 1, 4, -4, 4, -4, 3, -1, -4, -2, 0, 0}; {0, 0, 4, 1, 8, 3, 5, 3, 2, 9, 11, 4}; {5, 1, 1, 6, -1, 2, -2, -5, -3, -3, 0, 0}; {-5, 4, 5, -1, 6, -5, 1, 5, 5, -2, 0, 0}; {6, 3, 4, 0, 6, 4, -2, 4, 6, -2, 0, 0}; {-5, 6, -3, -5, 3, -1, 2, -2, 3, 6, 0, 0}; {-2, 2, -2, 1, 5, -2, -2, 6, 4, -1, 0, 0}; {-5, -1, -5, -2, 4, -1, -4, 4, 5, 6, 0, 0}; {6, 6, -2, 3, 4, -2, 5, 3, 3, 3, 0, 0}; {3, 3, -5, -5, 1, -3, 3, -4, 2, 3, 0, 0}; {1, 4, -1, 4, -3, 3, 0, 2, 6, 2, 0, 0}; {6, 1, 0, 2, 3, 5, 2, 3, 2, 2, 0}; {3,-5, 3, -1, -5, 6, 2, 5, -2, 0, 0, 0}; {0, 1, 6, -1, 6, 3, 4, -1, -2, 2, 0, 0}; {0, 0, 4, 8, 6, 2, 2, 11, 3, 4, 0, 5}; {-1, 6, 5, 4, -2, 1, -2, 0, 1, - -4, 0, 0}; {6, -4, 2, -4, -1, 4, 1, -5, 3, 0, 0, 0}; 0, 4, 0, -4, 2, -2, -2, 6, -4, 0, 0, 0}; {0, 0, 4, 8, 10, 3, 11, 4, 2, 2, 11, 6}, {-3, 1, -3, 6, -4, 6, 5, -1, -5, -4, 0, 0}; {1, 3, -3, 4, 6, -3, 2, 0, 5, 1, 0, 0}; {0, 0, 4, 10, 2, 4, 7, 6, 10, 7, 5, 3}; {1, 4, -1, -3, -1, -4, 5, -2, -2, -5, 0, 0}, {0, 0, 4, 11, 11, 0, 11, 9, 3, 5, 2, 8}; {5, 1, 2, 6, 0, 2, -2, 6, -3, -4, 0, 0}, {3, -3, -4, -1, 3, -2, -5, -5, -1, 4, 0, 0}; {0, 0, 5, 2, 1, 2, 1, 9, 6, 10, 3, 8}; {0, 0, 5, 2, 1, 5, 2, 5, 0, 10, 0, 7}; {2, -4, -5, -1, 2, -4, -4, 4, -1, 1, 0, 0}; (5, 2, 4, -1, 5, 6, 1, 5, 5, -3, 0, 0}, {5, 0, 0, 5, -4, 3, 5, 1, -3, 0, 0, 0}, {0, -3, -1, -5, 2, -3. -4. 3, -5, -2, 0, 0}, {0, -4, -3, 4, -2, -5, 1, 6, -5, -1, 0, 0}; {-3, -5, -2, -4, 4, -4, 1, 6, -4, 6, 0, 0}; {3, 6, 2, 5, -5, 2, -2, 5, 5, 5, 0, 0}; {2, -4, -5, 1, 1, -5, 2, 6, 1, 1, 0, 0}; {-4, 2, 1, -4, -2, 3, -3, 6, -2, 0, 0, 0}; {-5, 4, 6, 4, -3, 0, -4, 2, 2, -4, 0, 0}; {-3, -1, 6, -3, 1, 0, 4, 2, .... 5, 3, 0, 0}; {-1, 4, 2, -3, -4, 0, 6, -2, 2, 0, 0, 0}, {-1, 0, 6, -3, 6, -2, 6, -1, -4, 6, 0, 0}, {-3, -1, 6, -2, 3, 1, 0, 5, 3, -2, 0, 0}, {-4, -1, -5, 1, 0, 5, 0, 3, 5, 4, 0, 0}; {0, -1, 3, 5, 4, -1, 4, 5, 0, 4, 0, 0}; {-1, -1, 4, -5, -4, 3, -2, 1, -3, 2, 0, 0}; {2, -4, -4, -1, 2, -3, -4, 4, -1, 2, 0, 0}; {-3, -5, -1, -5, 4, 3, -3, -1, 5, -2, 0, 0}, 1-3, 1, -1, 1, 5, 1, -3.. 5, 3, 4, 0, 0}; {-2, -3, 2, -1 , 3, 4, -3, 2, 5, 2, 0, 0}, {-4, -5, 0 -2, -4, -3 3, 6, 2, -5, 0, 0}, {0, 0, 6, 5, 8, 6, 6, 8, 1, 6, 11, 7}; {-5, 5, -3, 6, -4, 1, -3, 1, 4, 6, 0, 0}, {-4, 1, 0, 5, 1,4, -2, 4, 4, 1, 0, 0}; {6, -,3, 6, --3, 3, 6, -5, -1, -5, 4, 0, 0}; {4, 2, 6, 4, 6, 0, -4, 0, 3, 6, 0, 0}; {-4, 2, 2, -4, 6, -1, 4, -1, 0, 0, 0, 0}, 4, 6, -2, -3, 1, -5, 0, 3, 6, 3, 0, 0}; {0, 0, 6, 7, 5, 5, 0, 4, 6, 3, 10, 4}; {-4, -1, -4, 1, -3, 2, 3, -3, 4, 3, 0, 0}; {4, -5, 4, -3, 2, 4, -2, -4, 4, 0, 0, 0}; -2, 4, 4, 1, -2, 3, 4, -4, 1, -2, 0, 0}, {4, -5, 4, -2, -2, 3, -2, 1, 4, 3, 0, 0}; {0, 0, 6, 9, 6, 10, 5, 9, 8, 1, 11, 9}; {0, 0, 6, 9, 11, 3, 11, 3, 0, 1, 9, 4}; {0, 0, 6, 10, 2, 1, 4, 0, 8, 8, 11, 8}; { -2, -3, 2, 6, 1, -5, -3, 3, 1, -2, 0, 0}; {6, 4, -3, 2, -2, 5, 5, -2, 0, 3, 0, 0}; {4, 2, -5, 0, -3, 6, 0, 2,

-4, 0, 0}; {3, 0, 4, - 2, 0, 6, 0, -1, -5, -3, 0, 0}; {0, 0, 7, 5, 0, 9, 2, 9, 3, 6, 4, 5}; {-3, 5, -4, 2, 2, -2, 2, 1, -4, -3, 0, 0}; {-2,-3, 3, 1, -4, -3, 4, -4, 2, -2, 0, 0}; {-1, 6, -4, 2, -5, 3, 0, 4, -3, -2, 0, 0}; {-3, 2, 2, 6, 1, -5, 3, 3, 0, 3, 0, 0}; {0, 0, 7, 6, 9, 3, 3, 1, 3, 5, 1, 5 }; {-3, -5, 0, -2, 2, 4, -3, 2, 5, 2, 0, 0}; {1, -3, 0, -4, 1, -2, -4, 4, - 5, -3, 0, 0}; {-3, 6, -2, -5, -4, 2, -2, 1, 4, 6, 0, 0}; {0, 0, 7, 8, 2, 1, 9, 4, 9, 7, 8, 10}; {0, 3, 1, 5, -2, 3, 4, -3, 5, 2, 0}, 0}; {-2, 4, 5, 1, -2, 4, 4, -4, 1, -1, 0, 0}; {-5, 0, 0, -5, 4, -3, -5, 1, 3, 0, 0, 0};. {4, 11, -2, 6, -3, -5, -1, -1, -5, 0, 0}; {-4, 0, -1, 6, 0, 1, -5, 3, 5, 1, 0, 0}; {0, 0, 7, 11, 5, 3, 6, 3, 0, 0, 4, 3}; {0,0, -5, -1, 6, -4, 1, -3, 6, -1, 0.. 0}; {0, 0, 7, 11, 10, 11, 4, 3, 7, 0, 8, 8}; {-4, 5, -2, 0, 6, -4, 5, 2, -3, 0, 0}; {0, 4, 4, 2, 2, -3, -1, 4, -2, -5, 0, 0}; {0, 0, 8, 3, 3, 2, 4, 10, 2, 0, 8, 0}; {2, 1, -4, 2, 3, 3, 3, 6, 4, -2, 0, 0}; ; {4, 2, -4, 2, 5, 1, 6, 5, 5, 6, 0, 0}; {1, -3, 1, 6, 6, -3, 1, 0, -2, 3, 0, 0}; {2, -1, 4, -1, 6, 5, 1, 2, -4, -1, 0, 0}; 0}; {4, 2, -4, 4, 1 5, -4, 4, 6, 0, 0, 0} 1 -3, 1, -4, 0, -3, -3, 0, 6, 6, 0, 0}; {-3, 5, -3, 4, -2, -4, 6, 4, -5, -4, 0, 0}; {-2, -5, 0, -4, 6, 5, -4, -1, 5, -3, 0, 0}; {0, 0, 8, 8, 0, 10, 8, 2, 7, 2, 9, 0}, {3, - 3, -1, 5, 5, 1, 5, 1, -3, -1, 0, 0}; {-4, -5, 2, 1, 6, -3, 3, -3, 1, -1, 0, 0 } > {0, 0, 8, 8, 2, 8, 3, 10, 2, 0, 2, 4 }; {6, -2, -2, 2, 3, -2, 3, -3, 3, 2, 0, 0}; {-5, 6, 1, 0, 2, -1, 4, -1, 2, -5, 0, 0}; {-2, -1, 0, 3, -3, -1, 5, -2, -5, 4, 0, 0}; {-3, 1, 1, 6, 3, -1., 4, 6, 3, 2, 0, 0}; {6, -1, 0, 6, 5, -4, 2, -3, 1, 0, 0, 0}; {-3, 3, 5, 0, -4, 1, -2, -4, -4, 0, 0}; {-4, 0, 0, 6, 0,-5, -2 , -4, -4, 5, 0, 0}; 10, 0, 8, 10, 0, 7, 2, 0, 4, 8, 6, 9}; {4, 1, 6, 5, -3, 5, -2, 2, 5, 2, 0, 0}; {0, 0, 8, 11, 9, 4, 11, 2, 6, 5, 5, 10}; {0, 0, 9, 0, 5, 10, 10, 10, 3, 1 1, 3, 3}, {--4, 6, 1, 2, -4, 4, -3, -1, 2, -1, 0, 0}; 1, 5, -4, 6, 1, 6, 4, -4, -3, 3, 0, 0}; {0, 0, 9, 2, 3, -1, 9, -1, 10, 5, 6, 9}; {3, 3, 0, 5, -5, 4, -3, 2, -1, 6, 0, 0}; {-5, 2, 6, -5, -4, -2, 4, -3, 5, 3, 0, 0}; {O, 0, 9, 3, 10, 3, 4, 1, 4, 9, 10, 1 }; {-5, 4, -2, 2, -3, -1, 3, 3, -1, -2, 0, 0}; {-2, -3, 5, -1, -2, 3, -4, 3, -5, 0, 0, 0}; {6, 5, 1, -5, -5, 0, 5, 1, 6, -1, 0, 0}; {5, 4, 0, -5, 3, -4, 2, 5, -4, 0, 0, 0}; {-1, 6, -2, 1, -3, -2, -5, 4, -5, -5, 0, 0}; {0, 0, 9, 5, 10, 0, 5, 1, 6, 6, 8, 4}, {3, -2, 2, 5, 5, 5, 6, 1, 6, 4, 0, 0}; {0, 0, 9, 5, 11, 11, 0, 4, 8, 3, 6, 7}; {-4, 3, -5, -1, -5, -4, 6, 4, -5, -5, 0, 0}, {3, -5, -4, -3, 3, -2, -5, 5, 0, 3, 0, 0}; {0, -5, -1, 4, 4, 0, 3, -1, -3, -3, 0, 0}. {0, 5, -5, -2,-1, -3, -4, 3, -3, 3, 0, 0}; {0, 0, 9, 8, 2, 5, 0, 6, 7, 11, 9, 2}; {-2, -2, -5, 6, 0, 5, -1, 4, -3, -3, 0, 0}; {2,. -2, 3, -2, 4, 5, 2, 2, 5, 5, 0, 0}; {3, -3, 0, 6, 5, 1, 4, -1, -3, -2, 0, 0}; } ; {2, -2, 3, -1,6, 5, 1, 2, -4, -1, 0, 0}; {-5, -1, 0, 4, -2, 5, 2, 2, -2, 2, 0, 0}; {4, -5, -5, -1, 4, -1, 2, 0, -2, 5, 0, 0}; {-1, 3, 2, 6, 0, -5, -1, -1, 5, 3, 0, 0}; }, {-5, 2, 6, 3, 4, 6, -1, 0, -3, 6, 0, 0}, {6, -3, -2, 3, -3, 4, -3, -2, 6, 2, 0, 0}; }; {-4, 0, 2, -3, 3, 0, 4, 6, 3, 1, 0, 0}-; { 0, 0, 6, 0, -1, 8, -1, 4, 5, 10, 10, 4, 1}; {-4, 2, 6, 3 4, 6 -1, -3, 6, 0, 0}; {3, -2, 2, -3, 2, 4, 5, -5, 1, 0, 0}; {0, 0, 10, 2, 3, 8, 9, 10, 6, 1, 7, 0}; {2, -4, 0, -2, 6, 6, 1, -4,

-2,0, 0, 0}; {-1, -1, -3, 1, -5, 4, 1, 1, 5, -3, 0, 0} , {1, -4, -1, 0, 2, 2, 2, 5, -5, 4, 0, 0}; {4, -1, 4, 4, -1, 0, -4, 5, -2, 0, 0, 0}; {4, 0, 6, -5, 4, -5, -1, 4, 3, -2, 0, 0}; {1, 6, -3, -4, 2, 6, 2, -1, -2, 2, 0, 0}; {3,-1, 5, -5, 6, -1, 2, 1, 0, 4, 0, 0}; {0, 5, -4, -4, -1, 6, 1, -2, -3, 2, 0, 0}; }; {0, 0, 10, 5, 5, 10, 3, 9, 10, 10, 2, 9}; {5, -4, -1, 4, -5, 5, -2, 0, 0}; }; {3, 0, -5, 0, -5, -2, 1, 0, 3, 4, 0, 0}; }; {1, -1, -5, 2, -4, -3, -2, 4, -4, 0, 0, 0}; {0, 0, 10, 7, 3, 8, 3, 7, 6, 8, 11, 4}, {-3, 4, -3, -1, 5, 2, -1, 0, -2, -4, 0, 0}; {-3, 6, 1, -5, 1, 1, -1, 2, 5, -1, 0, 0}; {5, -3, --- 1, 1, -2, 5, 2, 3, 0, 4, 0, 0}; }; {-5, 4, -1, 6, -3, 6, 5, 3, -5, -2, 0, 0}; }; {1, 0, -3, -4, 1, 5, 5, -2, -3, 0, 0}; { 0, 0, 10, 11, 0, 2, 6, 10, 8, 3, 10, 3}, {-2, 4, -4, 3, -4, -5, -1, -1, 3, 3, 0, 0}; {-4, 2, -5, 2, -3, 6, 5, -2, 0, 2, 0, 0}; {-1, 6, 0, -4, -4, 2, 6, -4, -2, 1, 0, 0}; {0, 0, 11, 1, 3, 9, 8, 5, 1, 6, 0, 8}; {6, 1, -5, 4, 4, -1, 3, -5, -4, 0, 0, 0}; {-4, 2, -5, 3, 4, 6, 0, 0, -3, -5, 0, 0}; {0, 0, 11, 4, 1, 7, 8, 1, 3, 9, 0, 9}; {-1, 4, -4, -5, 1, 4, 2, -1, -3, 2, 0, 0}; {-1, 1, 2, -2, 2, -1, 3, -3, 6, 5, 0, 0}; {0, 0, 11, 6, 1, 0, 4, 7, 110, 5, 8, 4}; {-5, 2, -4, -2, 1, 3, -3, 5, 1, 1, 0, 0}; {-5, 3, -2, 1, -4, -1, 3, 3, -1, -2, 0, 0}; {-4, 4, -1, 3, -2, 1, 3, 2, 4, 5, 0, 0}; {3, -3, 2, 4, -3, 5, 3, 4, -1, -2, 0, 0}; {0, 0, 11, 7, 8, 4, 11, 10, 2, 2, 9, 2}; {5, 2, -2, 3, 1, 1, -4, -2, 5, -3, 0, 0}; {6, 3, -1, 5, -5, 3, 6, 5, 5, -2, 0, 0}; {1, -4, 2, 6, -4, 3, 1, 0, -2, -3, 0, 0}; {-5, 4, 0, -5, -5, 5, -5, 2, 5, -2, 0, 0}; {2, -1, -5, 2, 6, 3, 2, 2, -5, -2, 0, 0}; {0, 0, 11, 9, 4, 9, 3, 9, 3, 4, 8, 8}; {5, 1, -4, 2, -4, -1, 1, 0, 3, 4, 0, 0}; {6, 0, 5, -3, 5, 5, 5, 3, -3, -4, 0, 0}; {-5, 1, 6, 0, -4, 5, 5, -3, 0, 1, 0, 0}; {2, -2, 5, 1, 2, -3, 1, 6, -4, -1, 0, 0}; und {1, -4, 2, -3, -1, -2, -3, 0, 5, 6, 0, 0}; und {0, 0, 0, 0, 3, 6, 0, 10, 6, 3, 8, 1}; {0, 0, 1, 3, 3, 9, 6, 2, 4, 11, 2, 9}; {0, 0, 3, 0, 9, 4, 3, 3, 9, 1, 8, 0}; {0,0, 3, 1, 10, 11, 8, 2, 6, 1, 2, 7}; {0, 0, 3, 1, 11, 6, 7, 1, 4, 11, 7, 11}; {0, 0, 3, 6, 10, 8, 8, 3, 11, 9, 0, 8}; {0, 0, 3, 7, 1, 4, 7, 6, 4, 0, 5, 2}; {0, 0, 4, 8, 8, 3, 9, 0, 7, 1, 10, 10}; {0, 0, 6, 5, 3, 5, 1, 5, 1, 8, 1, 2}, {0, 0, 6, 6, 1, 3, 4, 4, 5, 0, 6, 0}; {0,0, 6, 8, 1, 3, 1, 4, 9, 5, 11, 8}; {0, 0, 7, 8, 8, 6, 2, 9, 6, 10, 3, 9}; {0, 0, 7, 8, 10, 9, 11, 2, 9, 1, 8, 4}; {0, 0, 8, 4, 4, 9, 3, 0, 5, 11, 2, 2}; {0, 0, 8, 5, 7, 10, 2, 10, 0, 11, 4, 11}; {0, 0, 8, 6, 9, 3, 11, 3, 4, 0, 4, 5}; {0, 0, 9, 1, 3, 9, 9, 9, 3, 0, 5, 0}; {0, 0, 10, 0, 7, 11, 7, 4, 11, 11,2, 5}; {0, 0, 10, 11, 2, 7, 8, 2, 10, 2, 8, 4}; und {0, 0, 11, 6, 5, 0, 8, 1, 0, 4, 10, 1}; und

Verarbeiten (S104) des ersten Signals basierend auf den N Elementen in der Sequenz $\{f_n\}$.

4. Signalverarbeitungsverfahren nach Anspruch 3, wobei das Empfangen eines ersten Signals, das auf N Unterträgern transportiert wird, Folgendes umfasst:

Erlangen des ersten Signals auf den N Unterträgern auf N aufeinanderfolgenden Unterträgern; oder
Erlangen des ersten Signals auf den N Unterträgern auf N gleichmäßig beabstandeten Unterträgern.

5. Sequenzbasierte Signalverarbeitungsvorrichtung, umfassend:
eine Verarbeitungseinheit, die dazu konfiguriert ist, eine Sequenz $\{f_n\}$ zu bestimmen, die N Elemente umfasst, wobei $f_n$ ein Element in der Sequenz $\{f_n\}$ ist, die Sequenz $\{f_n\}$ eine Sequenz ist, die eine voreingestellte Bedingung erfüllt, die voreingestellte Bedingung $f_n = A \cdot x_n \cdot e^{2\pi j \cdot a \cdot n}$ ist, ein Wert von n von 0 bis N-1 reicht, A eine komplexe Zahl ungleich Null

ist, $\alpha$ eine reelle Zahl, $j = \sqrt{-1}$ , für ein Element $X_n, x_n = u \cdot e^{2\pi j \cdot s_n/M}$, M=12, ist, u eine komplexe Zahl ungleich Null ist und eine Menge, die aus einer ersten Sequenz $\{S_n\}$ besteht, die aus einem Element $S_n$ besteht, mindestens eine der Sequenzen in einer ersten Sequenzmenge umfasst, wobei die Sequenzen in der ersten Sequenzmenge einige oder sämtliche der folgenden Sequenzen umfassen:

{-2, 4, -2, 4, 0, 2, 2, 0, 5, 5, 0, 0}; {--1, 6, 1, -4, -2, 4, -5, -5, 6, -5, 0, 0}; {3, -3, 3, -3, 0, -2, -2, 0, -5, -5, 0, 0}; {2, -4, 2, -4, -1, -2, -2, -1, -5, 6, 0, 0}; {-4, 2, -4, 3, -1, 1, 2, 1, 4, 5, 0, 0}; {0, 6, 0, -5, -2, -4, -3, -1, 6, 6, 0, 0}; {0, 6, 0, -5, -2, -3, -3, -1, 6, 6, 0, 0}; {-1, 5, -1, 6, -2, --3, -3, -1, 5, 5, 0, 0}; {-4, 2, -4, 4, -4, -5, -4, -2, 5, 5, 0, 0}; {-5, 1, -5, 3, -5, 6, -5, -3, 5, 5, 0, 0}; {4, -2, 4, 0, -4, -1, 0, -1, 3, 4, 0, 0}; {0, 4, -4, 2, -3, -2, -3, 4, 1, -2, 0, 0}; {-1, 3, -5, 1, -4, -3, -3, 4, 1, -2, 0, 0}; {0, 5, -2, 5, 2, 4, 3, 1, -3, -4, 0, 0}; {-3, 1, 5, -1, -5, -4, -5, 3, 0, -3, 0, 0}; {3, -3, 3, -1, 0, 6, -3, -3, -5, -4, 0, 0}; {1, 6, -1, 6, 6, 0, 2, 0, -3, -1, 0, 0}; {5, -2, 3, -2, 0, -1, 0, 0, -5, 6, 0, 0}; {-3, 3, -3, 5, -4, -4, -4, -2, 5, 5, 0, 0}; {-3, 0, 3, -3, 3, 1, 3, -5, 4, 1, 0, 0}; {-1, 4, -3, 5, 4, -2, 1, 0, -3, -2, 0, 0}; {3, -1, -5, -5, 1, -4, 0, 1, 4, -1, 0, 0}; {2, -2, 6, 6, 1, -5, 0, 1, 4, -1, 0, 0}; {0, -5, 2, 2, -5, 1, 4, 4, 6, 1, 0, 0}; {1, -3, 5, 6, 0, -5, -1, 1, 3, -1, 0, 0}; {-3, 4, -1, -1, 5, -1, 3, 4, 5, 0, 0, 0}; {-5, 1, 5, 6, -1, 4, -5, -5, -5, 1, 0, 0}; {-2, 5, 0, 0, 6, 0, 3, 4, 5, 0, 0, 0}; {-5, 1, -5, 6, -1, 5, -5, 6, -5, 1, 0, 0}; {3, -3, 3, 3, -4, 2, 5, 5, 6, 0, 0, 0}; {-3, 3, -3, -3, 4, -2, -5, -5, 6, 0, 0, 0}; {4, -3, 2, 2, -4, 1, -2, -3, -5, 0, 0, 0}; {5, -1, 5, 6, 1, -5, 5, 6, 5, -1, 0, 0}; {5, -1, 5, 6, 1, -4, 5, 5, 5, -1, 0, 0}; {3, -4, 1, 1, -5, 1, -3, -4, -5, 0, 0, 0}; {-1, 3, -5, 6, 0, 5, 1, -1, -3, 1, 0, 0}; {0, 5, -2, -2,5, -1, -4, -4, 6, -1, 0, 0}; {-2, 2, 6, 6, -1, 5, 0, -1, -4, 1, 0, 0}; {-2, 2, 6, 6, 0, 5, 1, -1, -3, 1, 0, 0}; {-3, 1, 5, 5, -1, 4, 0, -2, -4, 1, 0, 0}, {-3, 1, 5, 5, -1, 4, 0, -1, -4, 1, 0, 0}; {-2, 3, -4, -3, 4, -2, -5, -5, 6, -1 , 0, 0}, {3, 0, -3, 3, -3, -1, -3, 5, -4, -1, 0, 0}; {4, -2, 4, -4,

4, 5, 4, 2, -5, -5, 0, 0}; {-5, 2, -3, 2, 0, 1, 0, 0, 5, 6, 0, 0}; {-1, 5, -1, 3, 5, 1, 1, 6, 5, -1, 0, 0}; {0, -5, 2, -5, -2, -4, -3, -1, 3, 4, 0, 0}; {4, -2, 4, -3, 6, 6, 4, 3, -5, -5, 0, 0}; {2, -4, 2, -5, 4, 5, 3, 2, -5, -5, 0, 0}; {-3, 3, --3, 2, 0, -5, 4, 3, -1, 0, 0, 0}; {0, 6, 0, 5, 3, 4, 3, 1, 6, 6, 0, 0}; {6, 0, 6, -1, 2, 0, -1, 0, -4, -5, 0, 0}; {-4, 4, 1, -4, -4, 0, 4, 0, 3, -1, 0, 0}; {-1, 5, 0, 5, 3, 3, 2, 1, 6, -5, 0, 0}; {-3, 2, -4, 0, -2, -4, -5, 4, -4, -4, 0, 0}; {-1, 6, 2, -4, -2, -3, 4, -5, -1, 2, 0, 0}; {5, -2, 4, -3, 5, 6, 5, 3, -5, -5, 0, 0}; {-1, 5, 0, 6, -3, -4, -4, -2, 6, 6, 0, 0}; { 5, 1, -4, 3, 5, 6, -5, -3, 5, 5, 0, 0}; {5, -3, 2, -5, -3, 6, 3, -4, 6, 0, 0, 0}; {3, -5, 0, 5, -4, 5, 2, -5, 5, 0, 0, 0}; {0, 5, -1, 5, 5, -2, -2, 2, 2, 2, 0, 0}; {-5, 0, 6, 0, 2, 0, 0, 1, - 4, -5, 0, 0}; {-4, 1, -5, 3, -5, 6, -4, -3, 5, 5, 0, 0}; {-3, 1, 6, 1, -5, -4, -4, 3, 1, -2, 0, 0}; {6, - 3, 1, -5, 1, 0, 1, 6, 3, 0, 0, 0}; {-5, -1, 4, 0, 3, -3, -4, 2, 0, -2, 0, 0}; {5, 0, -4, -4, 2, -3, 1, 2, 4, -1, 0, 0}; {3, -2, 6, 6, 1, -4, 0, 1, 4, -1, 0, 0}; {-1, 5, 0, 0, 5, 0, 4, 4, 5, 0, 0, 0}; {5, -1, 6, 6, -1, -2, 4, 6, 2, 0, 0, 0}; {-1, 5, 0, 0, 6, 0, 3, 4, 5, 0, 0, 0}; {-1, 4, -2, -2, 4, -1, -4, -4, 6, -1, 0, 0}; {-5, -1, 4, 3, -3, 3, -1, -2, -4, 0, 0, 0}; {-3, 1, 6, 5, -1, 4, 0, -2, -3, 1, 0, 0}; {-2, 3, -3, -3, 4, -2 -5, -5, 6, -1, 0, 0}; {-5, -1, 4, 3, -2, 3, -1, -2, -4, 0, 0, 0}; {-4, 1 -5, -5, 3, -3, 6, 6, 6, -1, 0, 0}; {6, -2, 3, 2, -3, 2, -1, -3, -4, 0, 0, 0}; {3, 6, -2, -3, 3, -5, 3, 1, -2, 2, 0, 0}; {-5, -1, 4, 4, -3, 3, -1, -2, -4, 1, 0, 0}; {6, -2, 3, 3, -3, 3, -1, -2, -4, 0, 0, 0}; {5, -3, 2, 2, -4, 2, -2, -3, -5, 0, 0, 0}; {5, 1, -2, 4, -2, 0, -3, 6, -4, -1, 0, 0}; {3, -2, 6, -1, 4, 5, 1, -2, -2, 0, 0, 0}; {5, -1, -5, -1, 1, 3, -3, 3, 3, 1, 0, 0}; {4, 1, 0, -5, 1, 6, 2, 2, 5, -3, 0, 0}; {3, -1, -3, 3, -3, -1, 6, -4, -5, -1, 0, 0}; {1, -3, -5, 1, -5, -2, 6, -5, 6, -3, 0, 0}; {2, -5, 2, -5, 4, 5, 3, 2, -5, -5, 0, 0}; {-1, 3, -3, 1, 0, 4, 1, -5, 6, 2, 0, 0}; {-2, 2, -4, 0, -1, 3, 1, 6, 5, 3, 0, 0}; {5, -1,-5, 2, -5, -1, 3, 5, 4, 4, 0, 0}; {5, -1, -5, 2, -5, -1, 3, 6, 5, 4, 0, 0}; {0, 4, 2, 3, 6, 4, 0, 6, 4, 0, 0, 0}; {-3, 3, -1, 6, -5, -2, -4, -2, 3, 3, 0, 0}; {-4, -1, 4, -3, -1, -5, 3, -4, 5, 0, 0, 0}; {-5, -2, 3, -4, -2, -5, 4, -4, 6, 0, 0, 0}; {0, 4, -2, 4, -2, -3, -1, -1, 4, 3, 0, 0}; {6, -3, 2, -5, 4, -5, -5, -3, 6, 3, 0, 0}; {6, -2, 4, -2, -4, 1, 0, 4, 4, 2, 0, 0}; {6, -2, 4, -2, -3, 2, 1, 5, 4, 2, 0, 0}; {4, -3, 4, 0, 0, 6, -5, -1, 1, -1, 0, 0}; {-1, 2, -5, 1, 0, 4, 3, 6, 5, 3, 0, 0}; {3, 5, -3, 2, 3, -1, 6, -1, -5, 1, 0, 0}; {-2, 1, 6, 0, -5, -4, -2, -2, 4, 2, 0, 0}; {-3, 2, -3, 6, -3, 3, 4, -1, -2, -1, 0, 0}; {1, 3, -5, 1, 2, -3, 4, -3, 5, 0, 0, 0}; {0, 2, 6, 0, 1, -3, 4, -3, 5, 0, 0, 0}; {-3, -1, -2, 6, -2, -5, -3, -5, 5, 0, 0, 0}; {0, 3, -4, -5, 1, 6, 1, 0, -3, 1, 0, 0}; {-4, 3, 0, 4, -4, -3, 4, 0, 0, -1, 0, 0}; {-4, 4, 2, -5, 0, 3, -2, -5, -2, 0, 0, 0}; {-5, 3, 1, 6, -1, 2, -2, -5, -2, 0, 0, 0}; {5, 1, 0, 5, -2, 2, -3, 6, -2, 0, 0, 0}; {-4, 4, 3, -3, 3, -5, 4, 5, 5, -4, 0, 0}; {4, -1, -3, 3, -3, -1, -5, -4, 6, -2, 0, 0}; {-1, 5, 2, -4, -4, 1, 5, -1, 1, 0, 0, 0}; {-3, 3, 0, 6, -5, -1, -5, -2, 3, 2, 0, 0}; {2, 6, 1, 6, 6, -1, -2, 4, 3, 1, 0, 0}; {-1, 2, -4, 0, 0, 4, 2, -5, 5, 2, 0, 0}; {-2, 4, 1,-4, 3, -5, -1, 4, 4, 3, 0, 0}; {-5, -1, 6, -1, -3, 1, 2, -5, 4, 2, 0, 0}; {4, -4, 3, -4, -5, 0, -1, 4, 4, 1, 0, 0}; {-4, -4, 3, -4, -5, 0, -1, 4, 4, 2, 0, 0}; {2, 5, -1, 3, 1, 5, 3, -4, 6, 3, 0, 0}; {1, 4, -2, 3, 1, 5, 3, -5, 6, 3, 0, 0}; {3, -4, 4, -1, -1, 5, 6, -1, 1, 1, 0, 0}; {-2, 1, -5, 0, -1, 3, 2, 6, 5, 3, 0, 0}; {-2, 4, 1, -3, 3, -5, 0, 3, 3, 3, 0, 0}; {6, -2, 5, -1, 5, 5, -4, -4, 5, 5, 0, 0}; {5, -3, 4, -2, 5, 5, -5, -4, 5, 5, 0, 0}; {5, -2, 6, 1, 0, 6, -5, 0, 2, 0, 0, 0}; {1, 4, -2, 3, 0, 4, 4, -4, 6, 3, 0, 0}; {0, 2, -5, 0, 1, -3, 4, -3, 5, 0, 0, 0}; {-2, 0, 5, -2, 0, -4, 4, -3, 6, 0, 0, 0}; {5, -5, 0, 6, 3, -5, 5, -4, 6, 5, 0, 0}; {-5, -2, 4, -1, 5, -4, -5, 3, 0, -2, 0, 0}; {-3, -1, 4, 2, 4, -1, 6, 1, 0, 4, 0, 0}; {5, -5, 1, -1, 2, -3, 4, -1, -1, 3, 0, 0}; {-2, -5, -4, 2, -3, 2, 0, 2, 3, -5, 0, 0}; {0, -5, 6, -1, 3, 6, 1, -3, -1, -1, 0, 0}; {5, 0, 1, 5, 5, -3, 3, -2, 1, 0, 0, 0}; {1, -4, -5, 1, 3, -5, 1, -3, 0, 1, 0, 0}; {-5, 2, 1, -5, -2, 3, -3, 6, -2, 0, 0, 0}; {0, 6, 4, -2, -4, 1, 5, -1, 1, 1, 0, 0}; {-1, 4, 1, -5, -3, 3, 4, -1, 0, -2, 0, 0}; {-2, 4, 2, -3, 1, 5, 4, 5, -1, 2, 0, 0}; {-3, -1, 5, -2, -1, -5, 3, -4, 5, -1, 0, 0}; {-5, -3, 3, 4, -2, 6, 1, -5, 4, -1, 0, 0}; {6, -5, 0, 4, 5, 0, -5, -1, -5, 1, 0, 0}; {0, 4, 0, -5, -1, 4, 5, 1, -1, -3, 0, 0}; {2, -3, -3, 3, 5, 1, -4, 1, -2, -1, 0, 0}; {-3, 3, 2, -4, -3, 5, -1, 3, 0, 0, 0, 0}; {-4, 2, 1, -5, -4, 4, -2, 2, 0, 0, 0, 0}; {-3, -1, 6, -4, 6, -2, 5, -1, -4, 5, 0, 0}; {1, -4, -4, 3, 2, 6, 0, -3, 0, -1, 0, 0}; {-1, 5, 4, -2, -4, 0, 5, 0, 2, 1, 0, 0}; {0, -5, -5, 2, 1, 6, 0, -4, -1, -1, 0, 0}; {-1, 6, 6, 1, 1, 6, 0, -4, -1, -1, 0, 0}; {-4, 2, 1, -5, 6, -1, 3, -2, 1, 0, 0, 0}; {-3, 4, 4, -1, --1, 5, -2, 6, -2, -2, 0, 0}; {-4, 3, 3, -2, -2, 4, -2, 6, -2, -1, 0, 0}; {-4, 3, 3, -2, -1, 4, -2, -5, -1, -1, 0, 0}; {-5, 1, 0, 6, 6, -2, 4, -1, 1, 0, 0, 0}; {-4, 3, 3, -2, -1, 4, -1, -5, -1, 1, 0, 0}; {3, 5, 0, 3, -4, 4, 2, -5, 5, -1, 0, 0}; {-3, 3, 2, -3, 6, -3, 3, 0, 1, -1, 0, 0}; {1, 4, 0, -5, -1, 4, 5, 1, -1, -4, 0, 0}; {-3, -2, 4, -2, -1, -5, 2, -5, 4, -1, 0, 0}; {-4, 2, 2, -5, -3, 4, -2, 3, 0, 0, 0, 0}; {5, -3, -5, -1, -3, 4, -4, -3, 5, 4, 0, 0}; {-5, 3, 5, 1, 3, -4, 4, 3, -5, -4, 0, 0}; {6, 0, 0, 6, -5, 3, -2, 2, -1, 0, 0, 0}; {6, 0, 0, 6, -5, 3, -2, 3, -1, 0, 0, 0}; {-4, 2, 2, -4, 6, -2, 4, -1, 1, 1, 0, 0}; {-5, 1, 1, -5, 5, -3, 3, -2, 1, 1, 0, 0}, {6, 0, 0, 6, 5, -3, 2, -2, 1, 0, 0, 0}; {6, 0, 0, 6, 5, -3, 3, -2, 1, 0, 0, 0}, {4, -2, -2, 5, 3, -4, 2, -3, 0, 0, 0, 0}; {6, 3, -5, 2, -4, 6, 5, 3, 6, -5, 0, 0}; {-3, -5, 0, -3, 4, -4, -2, 5, -5, 1, 0, 0}, {-4, 3, 5, -1, 5, 2, 6, -5, 0, 0, 0, 0}; {4, -2, -1, 5, 4, -4, 2, -2, 0, 0, 0, 0}; {-1, 4, 4, -3, -2, 6, 0, 3, 0, 1, 0, 0}; {0, -5, -3, 4, -4, 5, 1, -5, -5, -2, 0, 0}; {5, -2, -2, 3 , 0, 4, -4, 3, 1, 2, 0, 0}; {0, 6, -5, 2, 0 5, 0, -4, -1, 0, 0, 0}; {-2, 3, 3, -3, -5, -1, 4, -1,2, 1, 0, 0}; (3, -4, -4, 2, -2, 1, -5, 3, 1, 1, 0, 0}; {2, -4, -3, 4, 1, 6, 1, -3, -1, 0, 0, 0}; {0, 4, 3, -4, 3, 6, -1, 6, 4, 2, 0, 0}; {-5, 5, -1, 1, -2, 3, -4, 1, 1, -3, 0, 0}; {-1, -3, 3, -4, 6, 3, -2, 0, -5, -1, 0, 0}; {-4, 4, -4, 1,-5, -4, 6, 4, -5, -5, 0, 0}; {6, 5, 0, -4, -5, 0, 5, 1, 5, -1, 0, 0}; {5, 3, -3, 4, 2, 6, -1, 5, -4, 1, 0, 0}; {3, 1, -5, 2, 1, 5, -3, 4, -5, 1, 0, 0}; {4, -1, 2, -5, 0, -1, -3, -5, 4, -3, 0, 0}; 3, -2, 1, -5, 1, -2, -4, 6, -5, -3, 0, 0}; {-4, 1, 2, -5, -4, 4, -2, 5, 0, 1, 0, 0}; {2, -4, -2, 4, 0, 5,

-3, -3, 1, -1, 0, 0}; {5, -2, -1, 5, 2, -3, 3, 6, 2, 0, 0, 0}; {2, 5, 4, -2, 3, -2, 0, -2, -3, 5, 0, 0}; {-5, -1, 0, -5, 2, -2, 3, 6, 2, 0, 0, 0}; {3, 1, -4, -2, -4, 1, 6, -1, 0, -4, 0, 0}; {2, -1, 5, -2, -5, 5, 0, 1, -4, -1, 0, 0}; {2, 0, -5, 2, 0, 4, -4, 3, 6, 0, 0, 0}; {0, -2, 5, 0, -1, 3, -4, 3, -5, 0, 0, 0}; {4, -1, 3, -4, 2, -1, 4, 6, -5, -4, 0, 0}; {2, -4, -1, 3, -3, 5, 0, -3, -3, -3 0, 0}; {4, -2, 1, 6, 0, -1, -3, -5, -4, -3, 0, 0}; {-1, 5, -4, 1, -5, 3, -1, -4, -4, -3, 0, 0}; {-2, 4, -5, 0, 6, 2, -1, -4, -4, -3, 0, 0}; {3, -3, 0, 6, 5, 1, 5, 2, -3, -2, 0, 0}; {5, 2, -4, 5, 1, 5, -4, 4, 6, 0, 0, 0}; {3, 3, 0, 1, -5, 0, 6, 2, -4, -4, 0, 0}; {4, -4, -3, 3, -3, 5, -4, -5, -5, 4, 0, 0}; {-1, 3, 5, -1, 5, 2, 6, 5, 6, 3, 0, 0}; {-3, 1, 3, -3, 3, 1, 6, 4, 5, 1, 0, 0}; {-4, -1, 0, 5, -1, 6, -2, -2, -5, 3, 0, 0}; {-5, -1, 1, -4, 2, -1, 3, 6, 4, 1, 0}; {5, -3, -1, 6, 1, -2, 2, 5, 2, 0, 0, 0}; {4, -4, -2, 5, 0, -3, 2, 5, 2, 0, 0, 0}; {4, -3, 0, -4, 4, 3, -4, 0, 0, 1, 0, 0}; {4, -2, 2, -1, -1, 6, -1, -3, -5, -4, 0, 0}; {0, -3, 4, 5, -1, 6, -1, 0, 3, -1, 0, 0}; {0, -2, 6, 0, -1, 3, -4, 3, -5, 0, 0, 0}; {-1, -3, 5, -1, -2, 3, -4, 3, -5, 0, 0, 0}; {-5, 2, -5, -1, 6, -5, 6, 4, -5, -5, 0, 0}; {-5, 3, -3, 2, -2, 0, 1, 0, 4, 5, 0, 0}; {-3, -5, 3, -2, -3, 1, 6, 1, 5, 1, 0, 0}; {-3, 5, -1, 5, -1, 1, 2, 1, 4, 5, 0, 0}; {-4, 4, -2, 4, -2, 1, 2, 1, 4, 5, 0, 0}; {-5, -3, -3, 3, -2, 0, 1, 0, 4, 5, 0, 0}; {4, -1, 4, -3, 4, 5, 5, 3, 6, 6, 0, 0}; {1, -4, 1, 6, 1, 2, 6, 5, 1, -1, 0, 0}; {2, -3, 2, -5, 3, 4, 4, 2, 6, 6, 0, 0}; {5, 2, -3, 4, 2, 5, -4, 4, 6, 0, 0, 0}; {4, 1, -4, 3, 1, 5, -3, 4, -5, 0, 0, 0}; {-5, 3, -3, 5, 3, -5, -3, 4, 6, 0, 0, 0}; {-2, 6, 0, -4, 4, -5, -2, 5, -5, 0, 0, 0}; {3, -2, 3, -1, 0, 6, -2, -3, -5, -4, 0, 0}; {0, -5, 0, -4, 1, 3, 2, 1, 5, 5, 0, 0}; {-1, 6, 0, -4, 3, 2, 2, -4, -1,2, 0, 0}; {6, 1, -5, 3, -5, 6, -5, -2, 3, 4, 0, 0}; {-1, 5, -2, 6, -1, 2, 2, 0, 4, 4, 0, 0}; {-3, 2, 6, 1, -4, -5, -1, 2, 2, 0, 0, 0}; {-5,-1, 2, -4, 2, 0, 3, 6, 4, 1, 0, 0}; {5, -1, 4, 1, -2, -3, 3, -4, --2, -1, 0,0}; {0, -4, 3, 3, -4, -4, 0, 4, 0, 1, 0, 0}; {-5, 3, -2 -2, 4, -2, 2, 3, 5, 0, 0, 0}; {6, 2, -3, -3, 3, -3, 1, 2, 4, 0, 0, 0}; {5, 1, -4, -4, 3, -3, 1, 2, 4, -1, 0, 0}; {6, 2, -3, -2, 3, -2, 1, 3, 4, 0, 0, 0}; {4, -1, 5, 5, -3, 3, 6, 6, 6, 1, 0, 0}; {5, 1, -4, -3, 2, -3, 1, 2, 4, 0, 0, 0}; {5, 1, -4, -3, 3, -3, 1, 2, 4, 0, 0, 0}; {2, -3, 3, 3, -4, 2, 5, 5, 6, 1, 0, 0}; {1, -4, 2, 2, -4, 1, 4, 4, 6, 1, 0, 0}; {1, -5, 0, 0, 6, 0, -3, -4, -5, 0, 0, 0}; {-5, 1, 6, 6, 1, 2, -4, 6, -2, 0, 0, 0}; {1, -5, 0, 0, -5, 0, -4, -4, -5, 0, 0, 0}; {-3, 2, 6, 6, -1, 4, 0, -1, -4, 1, 0, 0}; {-5, 0, 4, 4, -2, 3, -1, -2, -4, 0, 0, 0}; {6, -1, 3, 3, -2, 3, -1, -3, -4, 1, 0, 0}; {-1, -3, 6, 0, 3, -1, 2, 3, 3, -4, 0, 0}; {6, 3, -1, 5, -1, 0, -1, 6, -3, 0, 0, 0}; {6, 2, -3, 2, -4, -1, 3, 4, -1, -1, 0, 0}; {3, -2, 4, -4, 3, 4, 5, 3, 6, 6, 0, 0}; {4, -1, 5, -3, 5, 6, 4, 3, -5, -5, 0, 0}; {1, -4, 2, 6, 2, 3, 4, 2, 6, 6, 0, 0}; {1, -4, 2, -5, 3, 4, 3, 2, 6, 6, 0, 0}; {-2, 5, -1, 4, 1, 2, 2, 1, 5, 6, 0, 0}; {5, -1, 4, -3, 5, 6, 5, 3, -5, -5, 0, 0}; {-5, 3, -2, 5, 3, 6, -3, 4, 6, 0, 0, 0}; {-3, 4, -2, 4, -1, 1, 2, 1, 4, 5, 0, 0}; {-5, 2, -4, 2, -2, 0, 1, 0, 4, 5, 0, 0}; {-3, 5, 0, -5, 4, -5, -2, 5, -5, 0, 0, 0}; 6, 0, 5, -1, -5, -5, 5, 4, -4, -4, 0, 0}; {2, -4, 1, -5, 3, 4, 4, 2, 6, 6, 0, 0}; {2, -4, 1,

-5, 4, 4, 4, 2, 6, -5, 0, 0}; {-1, 6, 0, -5, -2, -4, -3, -1, 5, 5, 0, 0}; {-1, 6, 0, -5, -2, -3, -3, 1, 5, 5, 0, 0}; {-4, 3, -3, 4, -4, -5, -4, -2, 5, 5, 0, 0}; {-5, 2, -4, 3, -5, 6, -5, -3, 5, 5, 0, 0}; {-5,2, -4, 3, -4, -5, -5, -1, 2, 4, 0, 0}; und {-2, 5, -1, 6, -1, 2, 3, 1, 4, 5, 0, 0};

{-3, 2, -5, 0, -1, -3, -5, 5, -3, -4, 0, 0}; {6, 0, 6, 0, 4, -5, -4, 2, 0, -2, 0, 0}; {0, 0, 0, 1, 10, 8, 5, 0, 4, 9, 10, 2}; {1, -5, 1, -3, -5, -1, -1, 6, -5, 1, 0, 0}; {-4, 1, 6, 1, -2, 6, 0, 2, 4, 3, 0, 0}; {-3, 1, 5, 0, -5, -3, -4, 3, 0, -2, 0, 0}; {4, 5, 6, -2, 3, -1, 4, -1, -2, 4, 0, 0}; {-4, -1, 2, -4, 6, -2, -4, -5, -4, 3, 0, 0}; {-2, 3, -4, 4, 5, 6, 1, 1, -3, -5, 0, 0}; {0, 0, 0, 4, 8, 11, 9, 6, 10, 5, 0, 11}; {2, -4, 2, 1, 6, 4, -5, -1, 3, 1, 0, 0}; {5, 3, 1, 5, 1, 3, -2, 5, 6, -3, 0, 0}; {4, 6, -4, 4, -3, 6, 0, 6, 6, 3, 0, 0}; {-4, 0, 4, 3, -2, 3, -1, -2, -5, 0, 0, 0}; {-5, -5, -5, 2, 6, -2, 6, 4, -3, 6, 0, 0}; {-2, -4, 6, 0, 5, -3, -5, 3, -4, -1, 0, 0}; {1, -2, -5, 0, 5, 0, 3, 2, 4, 6, 0, 0}; {2, -3, 4, -4, -5, 6, -1, -1, 3, 5, 0, 0}; {4, 0, -4, 2, 1, 4, -4, 3, 5, 0, 0, 0}; {3, -2, 5, -2, 0, -2, -3, 3, 3, -2, 0, 0}; {5, -1, 5, -2, 0, 0, -1, 0, -4, 6, 0, 0}; {6, 1, -3, 3, -4, 0, 4, 6, 6, 5, 0, 0}; {6, 0, -5, 1, 0, 2, 0, 0, 5, 5, 0, 0}; {-1, 6, 2, -2, 3, -4, 0, 3, 3, 3, 0, 0}; {-1, 5, 0, -5, 3, 2, 2, -5, -2, 1, 0, 0}; {1, 6, 0, -5, 4, -2, 0, 3, 3, 3, 0, 0}; {0, 0, 1, 3, 11, 7, 11, 4, 5, 0,0, 7}; {6, -3, 1, -5, -2, -5, 3, -4, 6, 1, 0, 0}; {0, 2, 5, -2, 5, 3, 3, -3, 4, 0, 0, 0}; {-4, 1, -5, 4, -4, -5, -4, -2, 5, 4, 0, 0}; {2, 4, -5, 1, 5, 0, -5, 5, 3, -1, 0, 0}; {0, 0, 1, 5, 9, 2, 10, 3, 0, 8, 4, 4}; {-2, -1, 1, -5, 3, 6, 2, 0, -1, 6, 0, 0}; {0, 0, 1, 6, 3, -1, 4, 6, 1, 5, 0, 0}; {-5, 1, -4, -5, -1, 5, -5, -5, -4, 2, 0, 0}; {1, -5, 2, 1, 5, 0, 1, -3, -5, -4, 0, 0}; {-4, 0, 5, 2, -3, -4, 4, -2, 1, 1, 0, 0}; {0, 0, 1, 6, 11, 3, 10, 7, 4, 11, 2, 1}; {5, -1, 6, 6, 5, 2, -5, 4, 6, -4, 0, 0}; {-2, -5, 5, -4, 4, 6, 1, 6, -4, -4, 0, 0}; {-4, 3, -1, 0, 6, 6, -1, 3, -1, -1, 0, 0}; {0, 0, 1, 9, 0, 1, 6, 1, 8, 8, 5, 0}; {0, 0, 1, 9, 2, 5, 4, 8, 5, 1, 0, 6}; {-1, -5, 4, -4, 3, 5, 6, -5, -1, 0, 0}; {0, 0, 1, 10, 1, 8, 11, 3, 2, 8, 7, 2}; {2, -4, 3, -5, -5, 5, -2, 0, 4, 4, 0, 0}; {2, -4, 3, -5, -5, 5, -1, 0, 3, 4, 0, 0}; {0, 0, 2, 0, 8, 9, 6, 10, 3, 9, 9, 2}; {-3, 1, -5, -2, -2, 3, -1, 6, 5, 1, 0, 0}; {3, -4, 3, -4, 5, 5, 2, 2, -4, -3, 0, 0}; {-1, 0, 3, 4, -1, -5, 2, -5, 2, 3, 0, 0}; {-5, 0, -5, 1, 3, -4, -4, 2, 1, 0, 0, 0}; {4, -5, 0, 4, 2, 6, 3, -4, 6, 4, 0, 0}; {0, 4, -2, 4, -3, -4, -1, -2, 6, 5, 0, 0}; {5, -4, 1, 6, 1, -1, 1, 0, 6, 3, 0, 0}; {-1, 6, 3, 1, 6, -1, -2, 0, -5, -1, 0, 0}; {3, 6, -1, 5, 0, -2, 0, -2, -4, -5, 0, 0); {3, -3, 5, 2, 2, -3, 1, -5, -3, -1, 0, 0}; {4, -5, 0, -5, -4, 0, 2, 1, 5, 1, 0, 0}; {-3, 0, 5, 0, -5, -3, -5, 3, 0, -2, 0, 0}; {0, 0, 2, 7, 6, 4, 11, 8, 5, 9, 4, 7}; {-3, 0, 5, 2, -5, 3, -1, -2, 2, 2, 0, 0}; {-1, -1, 1, -4, 6, -3, 3, -2, -1, 5, 0, 0}; {3, 6, -1, -2, 3, -5, 3, 1, -2, 2, 0, 0}; {3, -1, -3, 1, 2, 5, 3, -5, 1, 4, 0, 0}; {0, 0, 2, 10, 4, 0, 11, 9, 6, 0, 3, 5}; {4, -2, 6, -3, -4, 6, 1, 0, 3, 6, 0, 0}; {-1, 0, 3, 1, 0, -5, -2, 5, 1, 6, 0, 0}; {0, 0, 2, 11, 10, 4, 6, 9, 3, 8, 2, 9}; {0, 0, 2, 11, 11, 5, 6, 2, 5, 10, 6, 1}; {-5, -2, 4, 4, -2, 3, 0, -2, -4, 0, 0, 0}; {6, 6, -3, -5, 3, -2, 2, -4, 3, 5, 0, 0}; {0, -4, -5, 1, -5, -2, 5, -4, -5, -1, 0, 0}; {-4, 4, 3, -2, 1, 5, -1, -4, -1, -2, 0, 0}; {2, -5, 3, -4, 3, 3, 6, -5, 4, 5, 0, 0}; {0, 0, 3, 3, 7, 1, 5, 3, 1, 11, 7, 11}; {0, 0, 3, 3, 11, 8, 5, 7, 3, 6, 11, 4}; {1, 6, 2, -4, -2, 0, -2, - 1, 4, 3, 0, 0}; {0, 0, 3, 4, 11, 1, 7, 10, 5, 11, 6, 3}; {2, -2, -3, -5, 0, 5, -4, -4, 1, -3, 0, 0}; {-3, 5, 4, 3, -3, 2, 5, -5, 0, -3, 0, 0}; {0, 0, 3, 6, 5, 2, 7, 4, 3, 1, 7, 0}; {-3, 1, -4, 3, 6, -2, -3, 5, 1, -1, 0, 0}; {-1, 2, -4, 2, -4, 6, 1, 2, -2, -2, 0, 0}; {-1, 2, -4, 2, -4, -4, -1, -2, 4, 2, 0, 0}; {0, 0, 3, 8, 2, 2, 9, 7, 6, 2, 6, 3}; {0, 0, 3, 8, 10, 7, 4, 3, 8, 4, 8, 6}; {3, 2, 4, -3, 6, -1, 5, 0, 1, 5, 0, 0}; {2, 1, 3, -4, 5, -2, 5, 0, 1, 5, 0, 0}; {-5, 3, 2, 5, 3, 0, 4, -3, 5, -4, 0, 0}; {-3, 0, 6, 5, 0, 2, -4, 4, -1, -1, 0, 0}; {0, 0, 4, 0, 6, 1, 9, 7, 6, 2, 5, 8}; {-2, 1, -4, -4, 4, -4, 3, -1, -4, -2, 0, 0}; {0, 0, 4, 1, 8, 3, 5, 3, 2, 9, 11, 4}; {5, 1, 1, 6, -1, 2, -2, -5, -3, -3, 0, 0}; {-5, 4, 5, -1, 6, -5, 1, 5, 5, -2,0, 0}; {6, 3, 4, 0, 6, 4 -2, 4, 6, -2, 0 0}; {-5, 6, -3, -5, 3, -1, 2, -2, 3, 6, 0, 0}; {-2, 2, -2, 1, 5, -2, -2, 6, 4, -1, 0, 0}; {-5, -1, -5, -2, 4, -1, -4, 4, 5, 6, 0, 0}; {6, 6, -2, -3, 4, -2, 5, -3, 3, 3, 0, 0}; {3, 3, -5, -5, 1, -3, 3, -4, 2, 3, 0, 0}; {1, 4, -1, 4, -3, -3, 0, -2, 6, 2, 0, 0}; {6, 1, 0, -2, 3, --5, -2, -3, 2, -2, 0, 0}; {3, -5, 3, -1, -5, 6, 2, 5, -2, 0, 0}; {0, 1, 6, -1, 6, 3, 4, 1, -2, 2, 0, 0}; {0, 0, 4, 8, 6, 2, 2, 11, 3, 4, 0, 5}; {-1, 6, 5, 4, -2, 1, -2, 0, 1, -4, 0, 0}; {6, -4, 2, -4, -1, 4, 1, -5, 3, 0, 0, 0}; {0, 4, 0, -4, 2, -2, -2, 6, -4, 0, 0, 0}; {0, 0, 4, 8, 10, 3, 11, 4, 2, 2, 11, 6}; {-3, 1, -3, 6, -4, 6, 5, -1, -5, -4, 0, 0}; {1, 3, -3, 4, 6, -3, 2, 0, 5, 1, 0, 0}; {0, 0, 4, 10, 2, 4, 7, 6, 10, 7, 5, 3}; {1, 4, -1, -3, -1, -4, 5, -2, -2, -5, 0, 0}; {0, 0, 4, 11, 11, 0, 11, 9, 3, 5, 2, 8}; {5, 1, 2, 6, 0, 2, -2, 6, -3, -4, 0, 0}; {3, -3, -4, -1, 3, -2, -5, -5, -1, 4, 0, 0}; {0, 0, 5, 2, 1, 2, 1, 9, 6, 10, 3, 8}; {0, 0, 5, 2, 1, 5, 2, 5, 0, 10, 0, 7}; {2, -4, -5, -1, 2, -4, -4, 4, -1, 1, 0, 0}; {5, 2, 4, -1, 5, 6, 1, 5, 5, -3, 0, 0}; {5, 0, 0, 5, -4, 3, 5, 1, -3, 0, 0, 0}; {0, -3, -1, -5, 2, -3, -4, 3, -5, -2, 0, 0}; {0, -4, -3, 4, -2, -5, 1, 6, -5, -1, 0, 0}; {-3, --5, -2, 4, 4, -4, 1, 6, -4, 6, 0, 0}; {3, 6, 2, 5, -5, 2, -2, 5, 5, 5, 0, 0}; {2, -4, -5, 1, 1, -5, 2, 6, 1, 1, 0, 0}; {-4, 2, 1, -4, -2, 3, -3, 6, -2, 0, 0, 0}; {-5, 4, 6, 4, -3, 0, -4, 2, 2, -4, 0, 0}; {-3, -1, 6, -3, 1, 0, 4, 2, -5, 3, 0, 0}; {-1, 4, 2, -3, -4, 0, 6, -2, 2, 0, 0, 0}; {-1, 0, 6, -3, 6, -2, 6, -1, -4, 6, 0, 0}; {-3, -1, 6, - 2, 3, 1, 0, 5, 3, -2, 0, 0}; {-4, -1, -5, 1, 0, 5, 0, 3, 5, 4, 0, 0}; {0, -1, 3, 5, 4, -1, 4, 5, 0, 4, 0, 0}; {-1, -1, 4, -5, -4, 3, -2, 1, -3, 2, 0, 0}; {2, -4, -4, -1, 2, -3, -4, 4, -1, 2, 0, 0}; {-3, -5, -1, -5, 4, 3, -3, -1, 5, -2, 0, 0}; {-3, 1, -1, 1, 5, 1, 3, 5, 3, 4, 0, 0}; {-2, -3, 2, -1, 3, 4, -3, 2, 5, 2, 0, 0}; {-4, -5, 0, -2, -4, -3, 3, 6, 2, -5, 0, 0}; {0, 0, 6, 5, 8, 6, 6, 8, 1, 6, 11, 7}, {-5, 5, -3, 6, -4, 1, -3, 1, 4, 6, 0, 0}; {-4, 1, 0, 5, 1, 4, -2, 4, 4, 1, 0, 0}; {6, -3, 6, -3, 3, 6, -5, -1, -5, 4, 0, 0}; {4, 2, 6, 4, 6, 0, -4, 0, 3, 6, 0, 0}; {-4, 2, 2, -4, 6, -1, 4, -1, 0, 0, 0, 0}; {-4, 6, -2, -3, 1, -5, 0, 3, 6, 3, 0, 0}; {0, 0, 6, 7, 5, 5, 0, 0, 4, 6, 3, 10, 4}; {-4, -1, -4, 1, -3, 2, 3, -3, 4, 3, 0, 0}; {4,

-5, 4, -3, 2, 4, -2, -4, 4, 0, 0, 0}; {-2, 4, 4, 1, -2, 3, 4, -4, 1, -2, 0, 0}, {4, -5, 4, -2, -2, 3, -2, 1, 4, 3, 0, 0}; {0, 0, 6, 9, 6, 10, 5, 9, 8, 1, 11, 9}; {0, 0, 6, 9, 11, 3, 11, 3, 0, 1, 9, 4}; {0, 0, 6, 10, 2, 1, 4, 0, 8, 8, 11, 8}; {-2, -3, 2, 6, 1, -5, -3, 3, 1, -2, 0, 0}; {6, 4, -3, 2, -2, 5, 5, -2, 0, 3, 0, 0}; {4, 2, -5, 0, -3, 6, 0, 2, -4, 0, 0, 0}; {3, 0, 4, -2, 0, 6, 0, -3, -5, -3, 0, 0}; {0, 0, 7, 5, 0, 9, 2, 9, 3, 6, 4, 5}; {-3, 5, -4, 2, 2, 2, 2, -1, -4, -3, 0, 0}; { 2, -3, 3, 1, -4, -3, 4, -4, 2, -2, 0, 0}; {-1, 6, -4, 2, -5, 3, 0, -4, -3, -2, 0, 0}; {-3, 2, 2, 6, -1, -5, 3, 3, 0, 3, 0, 0}; {0, 0, 7, 6, 9, 3, 3, 1, 3, 5, 1, 5}; {-3, -5, 0, -2, 2, 4, -3, 2, 5, 2, 0, 0}; {1, -3, 0, -4, 1, -2, -4, 4, -5, -3, 0, 0}; {-3, 6, -2, -5, -4, 2, -2, 1, 4, 6, 0, 0}; {0, 0, 7, 8, 2, 1, 9, 4, 9, 7, 8, 10}; {0, 3, 1, 5, -2, 3, 4, -3, 5, 2, 0, 0}; {-2, 4, 5, 1, -2, 4, 4, -4, 1, - 1, 0, 0}; {-5, 0, 0, -5, 4, -3, -5, -1, 3, 0, 0, 0}; {4, -1, 1, -2, 6, -3, -5, -1, -1, -5, 0, 0}; {-4, 0, -1, 6, 0, 1, -5, 3, 5, 1, 0, 0}; {0, 0, 7, 11, 5, 3, 6, 3, 0, 0, 4, 3}; {0, 0, -5, -1, 6, -4, 1, -3, 6, -1, 0, 0}; {0, 0, 7, 11, 10, 11, 4, 3, 7, 0, 8, 8}; {-4, 5, -2, 0, 6, -4, 5, 2, -3, 0, 0, 0}; {0, 4, 4, 2, 2, -3, -1, 4, -2, -5, 0, 0}; {0, 0, 8, 3, 3, 2, 4, 10, 2, 0, 8, 0}; {2, 1, -4, 2, 3, -3, 3, 6, 4, -2, 0, 0}; {4, 2, 4, 2, 5, 1, 6, 5, 5, 6, 0, 0}; {1, -3, 1, 6, 6, -3, 1, 0, -2, 3, 0, 0}; {2, -1, 4, -1, 6, 5, 1, 2, -4, -1, 0, 0}; {4, 2, -4, 4, 1, 5, -4, 4, 6, 0, 0, 0}; {1, -3, 1, -4, 0, -3, -3, 0, 6, 6, 0, 0}; {-3, 5, -3, 4, -2, -4, 6, 4, -5, -4, 0, 0}; {-2, -5, 0, -4, 6, 5, -4, -1, 5, -3, 0, 0}; {0, 0, 8, 8, 0, 10, 8, 2, 7, 2, 9, 0}; {3, -3, -1, 5, 5, 1, 5, 1, -3, 1, 0, 0}; {-4, -5, 2, 1, 6, -3, 3, -3, 1, -1, 0, 0}; {0, 0, 8, 8, 2, 8, 3, 10, 2, 0, 2, 4}; {6, -2, -2, 2, 3, -2, 3, -3, 3, 2, 0, 0}; 5, 6, 1, 0, 2, -1, 4, -1, 2, -5, 0, 0}; {2, 1, 0, 3, -3, -1, 5, 2, -5, 4, 0, 0}; {-3, 1, 1, 6, 3, -1, 4, 6, 3, 2, 0, 0}; {6, -1, 0, 6, 5, -4, 2, -3, 1, 0, 0, 0}; {-3, 3, 5, 0, -4, 1, -2, -4, -3, -4, 0, 0}; {-4, 0, 0, 6, 0, -5, -2, -4, -4, 5, 0, 0}; {0, 0, 8, 10, 0, 7, 2, 0, 4, 8, 6, 9}; {4, 1, 6, 5, -3, 5, -2, 2, 5, 2, 0, 0}; {0, 0, 8, 11, 9, 4, 11, 2, 6, 5, 5, 10}; {0, 0, 9, 0, 5, 10, 10, 10, 3, 11, 5, 3}; {-4, 6, 1, 2, -4, 4, -3, -1, 2, -1, 0, 0}; {-1, 5, -4, 6, 1, 6, 4, -4, -3, 3, 0, 0}; {0, 0, 9, 2, 3, 1, 9, 1, 10, 5, 6, 9};. {3, 3, 0, 5, -5, 4, -3, 2, 1, 6, 0, 0}; {-5, 2, 6, -5, -4, -2, 4, -3, 5, 3, 0, 0}; {0, 0, 9, 3, 10, 3, 4, 1, 4, 9, 10, 1}; {-5, 4, -2, 2, -3, -1, 3, 3, -1, -2, 0, 0}; {-2, -3, 5, -1, -2, 3, -4, 3, -5, 0, 0, 0}; {6, 5, 1, -5, -5, 0, 5, 1, 6, -1, 0, 0}; {5, 4, 0, -5, 3, -4, 2, 5, -4, 0, 0, 0}; {-1, 6, -2, 1, -3, -2, -5, 4, -5, -5, 0, 0}; {0, 0, 9, 5, 10, 0, 5, 1, 6, 6, 8, 4}; {3, -2, 2, 5, 5, 5, 6, 1, 6, 4, 0, 0}; {0, 0, 9, 5, 11, 11, 0, 4, 8, 3, 6, 7}; {-4, 3, -5, -1, -5, -4, 6, 4, -5, -5, 0, 0}; {3, -5, -4, -3, 3, -2, -5, 5, 0, 3, 0, 0}; {0, -5, -1, 4, 4, 0, 3, 1, -3, -3, 0, 0}; {0, 5, -5, -2, -1, -3, -4, 3, -3, 3, 0, 0}; {0, 0, 9, 8, 2, 5, 0, 6, 7, 11, 9, 2}; {-2, -2, -5, 6, 0, 5, -1, 4, -3, -3, 0, 0}; {2, -2, 3, -2, 4, 5, 2, 2, 5, 5, 0, 0}; {3, -3, 0, 6, 5, 1, 4, 1, -3, -2, 0, 0}; {2, -2, 3, -1, 6, 5, 1, 2, -4, -1, 0, 0}; {-5, -1, 0, 4, -2, 5, 2, 2, -2, 2, 0, 0}; {4, -5, -5, -1, 4, -1, 2, 0, -2, 5, 0, 0}; {1, 3, 2, 6, 0, -5, -1, -1, 5, 3, 0, 0}, {-5, 2, 6, 3, 4, 6, -1, 0, -3, 6, 0, 0}; {6, -3, -2, 3, -3, 4, -3, -2, 6, 2, 0, 0}; {-4, 0, 2, -3, 3, 0, 4, 6, 3, 1, 0, 0}; {0, 0, 10, 1, 8, 1, 4, 5, 10, 10, 4, 1}; {-4, 2, 6, 3, 4, 6, -1, 0, -3, 6, 0, 0}; {3, -2, 3, 2, -3, 2, 4, 5, -5, 1, 0, 0}; {0, 0, 10, 2, 3, 8, 9, 10, 6, 1, 7, 0}; {2, -4, 0, -2, 6, 6, 1, -4, -2, 0, 0, 0}; {-1, -1, -3, 1, -5, 4, 1, -1, 5, -3, 0, 0}; {1, -4, 1, 0, 2, -2, 2, 5, -5, 4, 0, 0}; {4, -1, 4, 4, -1, 0, -4, 5, -2, 0, 0, 0}; {4, 0, 6, -5, 4, -5, -1, 4, 3, -2, 0, 0}; {1, 6, -3, -4, 2, 6, 2, -1, -2, 2, 0, 0}; {3, -1, 5, -5, 6, -1, 2, 1, 0, 4, 0, 0}; {0, 5, -4, -4, 1, 6, 1, -2, -3, 2, 0, 0}; {0, 0, 10, 5, 5, 10, 3, 9, 10, 10, 2, 9}; {5, 3, -1, 4, 4, -1, 4, -5, 5, -2, 0, 0}; {3, 0, -5, 0, -5, -2, 1, 0, 3, 4, 0, 0}, {1, -1, -5, 2, -4, -3, -2, 4, -4, 0, 0, 0}; {0, 0, 10, 7, 3, 8, 3, 7, 6, 8, 11, 4}; {-3, 4, -3, 1, 5, 2, -1, 0, -2, -4, 0, 0}; {-3, 6, 1, -5, 1, 1, -1, 2, 5, -1, 0, 0}; {5, -3, -1, 1, -2, 5, 2, 3, 0, 4, 0, 0}; {-5, 4, -1, 6, -3, 6, 5, 3, -5, -2, 0, 0}; {1, 0, -3, -4, 1, 5, -2, 5, -2, -3, 0, 0}; {0, 0, 10, 11, 0, 2, 6, 10, 8, 3, 10, 3}; {-2, 4, -4, 3, -4, -5, -1, -1, 3, 3, 0, 0}; {-4, 2, -5, 2, -3, 6, 5, -2, 0, 2, 0, 0}; {-1, 6, 0, -4, -4, 2, 6, -4, -2, 1, 0, 0}; {0, 0, 11, 1, 3, 9, 8, 5, 1, 6, 0, 8}; {6, 1, -5, 4, 4, -1, 3, -5, -4, 0, 0}; {-4, 2, -5, 3, 4, 6, 0, 0, -3, -5, 0, 0}; {0, 0, 11, 4, 1, 7, 8, 1, 3, 9, 0, 9}; {-1, 4, -4, -5, 1, 4, 2, -1, -3, 2, 0, 0}; {-1, 1, 2, -2, 2, -1, 3, -3, 6, 5, 0, 0}; {0, 0, 11, 6, 1, 0, 4, 7, 10, 5, 8, 4}; {-5, 2, -4, -2, 1, 3, -3, 5, 1, 1, 0, 0}; {-5, 3, -2, 1, -4, -1, 3, 3, -1, -2, 0, 0}; {-4, 4, 1, 3, -2, 1, 3, 2, 4, 5, 0, 0}; {3, -3, 2, 4, -3, 5, 3, 4, -1, -2, 0, 0}; {0, 0, 11, 7, 8, 4, 11, 10, 2, 2, 9, 2}; {5, 2, -2, 3, 1, 1, -4, -2, 5, -3, 0, 0}; {6, 3, -1, 5, -5, 3, 6, 5, 5, -2, 0, 0}; {1, -4, 2, 6, -4, 3, 1, 0, -2, -3, 0, 0}, -5, 4, 0, -5, -5, 5, -5, 2, 5, -2, 0, 0}; {2, -1, -5, 2, 6, 3, 2, 2, -5, -2, 0, 0}; {0, 0, 11, 9, 4, 9, 3, 9, 3, 4, 8, 8}; {5, 1, -4, 2, -4, -1, 1, 0, 3, 4, 0, 0}; {6, 0, 5, -3, 5, 5, 5, 3, -3, -4, 0, 0}; {-5, 1, 6, 0, -4, 5, 5, -3, 0, 1, 0, 0}; {2, -2, 5, 1, 2, -3, 1, 6, -4, -1, 0, 0}; und {1, -4, 2, -3, -1, -2, -3, 0, 5, 6, 0, 0}; und

{0, 0, 0, 0, 3, 6, 0, 10, 6, 3, 8, 1}; {0, 0, 1, 3, 3, 9, 6, 2, 4, 11, 2, 9}; {0, 0, 3, 0, 9, 4, 3, 3, 9, 1, 8, 0}, {0, 0, 3, 1, 10, 11, 8, 2, 6, 1, 2, 7}, {0, 0, 3, 1, 11, 6, 7, 1, 4, 11, 7, 11}; {0, 0, 3, 6, 10, 8, 8, 3, 11, 9, 0, 8}; {0, 0, 3, 7, 1, 4, 7, 6, 4, 0, 5, 2}; {0, 0, 4, 8, 8, 3, 9, 0, 7, 1, 10, 10}; {0, 0, 6, 5, 3, 5, 1, 5, 1, 8, 1, 2}; {0, 0, 6, 6, 1, 3, 4, 4, 5, 0, 6, 0}; {0, 0, 6, 8, 1, 3, 1, 4, 9, 5, 11, 8}, {0, 0, 7, 8, 8, 6, 2, 9, 6, 10, 3, 9}; {0, 0, 7, 8, 10, 9, 11, 2, 9, 1, 8, 4}; {0, 0, 8, 4, 4, 9, 3, 0, 5, 11, 2, 2}; {0, 0, 8, 5, 7, 10, 2, 10, 0, 11, 4, 11}; {0, 0, 8, 6, 9, 3, 11, 3, 4, 0, 4, 5}; {0, 0, 9, 1, 3, 9, 9, 9, 3, 0, 5, 0}; {0, 0, 10, 0, 7, 11, 7, 4, 11, 11, 2, 5}; {0, 0, 10, 11, 2, 7, 8, 2, 10, 2, 8, 4}; und {0, 0, 11, 6, 5, 0, 8, 1, 0, 4, 10, 1}; und die Verarbeitungseinheit ferner dazu konfiguriert ist, die Sequenz $\{f_n\}$ auf N Unterträger abzubilden, um ein erstes Signal zu erzeugen; und eine Sende-/Empfangseinheit, die dazu konfiguriert ist, das erste Signal zu senden.

**6.** Signalverarbeitungsvorrichtung nach Anspruch 5, wobei die Verarbeitungseinheit ferner zu Folgendem konfiguriert ist:

    entsprechendes Abbilden der N Elemente in der Sequenz $\{f_n\}$ auf N aufeinanderfolgende Unterträger oder
    entsprechendes Abbilden der N Elemente in der Sequenz $\{f_n\}$ auf N gleichmäßig beabstandete Unterträger.

**7.** Sequenzbasierte Signalverarbeitungsvorrichtung, umfassend:

    eine Sende-/Empfangseinheit, die dazu konfiguriert ist, ein erstes Signal zu empfangen, das auf N Unterträgern transportiert wird; und
    eine Verarbeitungseinheit, die dazu konfiguriert ist, N Elemente in einer Sequenz $\{f_n\}$ zu erlangen, wobei $f_n$ ein Element in der Sequenz $\{f_n\}$ ist, die Sequenz $\{f_n\}$ eine Sequenz ist, die eine voreingestellte Bedingung erfüllt, die voreingestellte Bedingung $f_n = A \cdot x_n \cdot e^{2\pi j \cdot a \cdot n}$ ist, ein Wert von n von 0 bis N-1 reicht, A eine komplexe Zahl ungleich Null ist, $\alpha$ eine reelle Zahl, $j = \sqrt{-1}$, für ein Element $X_n$, $X_n = u \cdot e^{2\pi j \cdot s_n/M}$ ist, u eine komplexe Zahl ungleich Null ist und eine Menge, die aus $\{S_n\}$ besteht, die aus einem Element $S_n$ besteht, mindestens eine der Sequenzen in einer ersten Sequenzmenge umfasst, wobei die Sequenzen in der ersten Sequenzmenge einige oder sämtliche der folgenden Sequenzen umfassen:

    {-2, 4, -2, 4, 0, 2, 2, 0, 5, 5, 0, 0}; {-1, 6, 1, -4, -2, 4, -5, -5, 6, -5, 0, 0}; {3, -3, 3, -3, 0, -2, -2, 0, -5, -5, 0, 0}; {2, -4, 2, 4, {-1, 2, -2, -1, -5, 6, 0, 0}; {-4, 2, -4, 3, -1, 1, 2, 1, 4, 5, 0, 0}; {0, 6, 0, -5, -2, -4, -3, -1, 6, 6, 0, 0}; {0, 6, 0, -5, -2, -3, -3, -1, 6, 6, 0, 0}; {-1, 5, 1, 6, -2, -3, -3, -1, 5, 5, 0, 0}; {-4, 2, -4, 4, -4, 5, -4, -2, 5, 5, 0, 0}; {5, 1, -5, 3, -5, 6, -5, -3, 5, 5, 0, 0}; {4, -2, 4, 0, -4, -1, 0, -1, 3, 4, 0, 0}; {0, 4, -4, 2, -3, -2, -3, 4, 1, -2, 0, 0}; {-1, 3, -5, 1, -4, -3, -3, 4, 1, -2, 0, 0}; {0, 5, -2, 5, 2, 4, 3, 1, -3, -4, 0, 0}; {-3, 1, 5, 1, -5, -4, -5, 3, 0, -3, 0, 0}; {3, -3, 3, -1, 0, 6, -3, -3, -5, -4, 0, 0}; {1, 6, -1, 6, 6, 0, 2, 0, -3, -1, 0, 0}; {5, -2, 3, -2, 0, -1, 0, 0, -5, 6, 0, 0}; {-3, 3, -3, 5, -4, -4, -4, -2, 5, 5, 0, 0}; {-3, 0, 3, -3, 3, 1, 3, 5, 4, 1, 0, 0}; {-1, 4, 3, 5, 4, -2, 1, 0, -3, 2, 0, 0}; {3, -1, -5, 5, 1, -4, 0, 1, 4, -1, 0, 0}; {2, -2, 6, 6, 1, -5, 0, 1, 4, -1, 0, 0}; {0, -5, 2, 2, -5,

1, 4, 4, 6, 1, 0, 0}; {1, -3, 5, 6, 0, -5, -1, 1, 3, -1, 0, 0}; {-3, 4, -1, -1, 5, -1, 3, 4, 5, 0, 0, 0}; {-5, 1, -5, 6, -1, 4, -5, -5, -5, 1, 0, 0}; {-2, 5, 0, 0, 6, 0, 3, 4, 5, 0, 0, 0}; {-5, 1, -5, 6, -1, 5, -5, 6, -5, 1, 0, 0}; {3, -3, 3, 3, -4, 2, 5, 5, 6, 0, 0, 0}; {-3, 3, -3, -3, 4, -2, -5, 6, 0, 0, 0}; {4, -3, 2, 2, -4, 1, -2, -3, -5, 0, 0, 0}; {5, -1, 5, 6, 1, -5, 5, 6, 5, -1, 0, 0}; {5, -1, 5, 6, 1, -4, 5, 5, 5, -1, 0, 0}; {3, -4, 1, 1, -5, 1, -3, -4, -5, 0, 0, 0}; {-1, 3, -5, 6, 0, 5, 1, -1, -3, 1, 0, 0}; {0, 5, -2, -2, 5, 1, -4, -4, 6, -1, 0, 0}; {-2, 2, 6, 6, -1, 5, 0, -1, -4, 1, 0, 0}; {-2, 2, 6, 6, 0, 5, 1, -1, -3, 1, 0, 0}; {-3, 1, 5, 5, -1, 4, 0, -2, -4, 1, 0, 0}; {-3, 1, 5, 5, -1, 4, 0, -1, -4, 1, 0, 0}; {-2, 3, -4, -3, 4, -2, -5, -5, 6, -1, 0, 0}; {3, 0, -3, 3, -3, -1, -3, 5, -4, -1, 0, 0}; {4, -2, 4, -4, 4, 5, 4, 2, -5, -5, 0, 0}; {-5, 2, -3, 2, 0, 1, 0, 0, 5, 6, 0, 0}; {-1, 5, -1, 3, 5, 1, 1, 6, 5, -1, 0, 0}; {0, -5, 2, -5, -2, -4, -3, -1, 3, 4, 0, 0}; {4, -2, 4, -3, 6, 6, 4, 3, -5, -5, 0, 0}; {2, -4, 2, -5, 4, 5, 3, 2, -5, -5, 0, 0}; {-3, 3, -3, 2, 0, -5, 4, 3, -1, 0, 0, 0}; {0, 6, 0, 5, 3, 4, 3, 1, 6, 6, 0, 0}; {6, 0, 6, -1, 2, 0, -1, 0, -4, -5, 0, 0}; {-4, 4, 1, -4, -4, 0, 4, 0, 3, -1, 0, 0}; {-1, 5, 0, 5, 3, 3, 2, 1, 6, -5, 0, 0}; {-3, 2, -4, 0, -2, -4, -5, 4, -4, -4, 0, 0}; {-1, 6, 2, -4, -2, -3, 4, -5, -1, 2, 0, 0}; {5, -2, 4, -3, 5, 6, 5, 3, -5, -5, 0, 0}; {-1, 5, 0, 6, -3, -4, -4, -2, 6, 6, 0, 0}; {-5, 1, -4, 3, -5, 6, -5, -3, 5, 5, 0, 0}; {5, -3, 2, -5, -3, 6, 3, -4, 6, 0, 0, 0}; {3, -5, 0, 5, -4, 5, 2, -5, 5, 0, 0, 0}; {0, 5, -1, 5, 5, -2, -2, 2, 2, 2, 0, 0}; {-5, 0, 6, 0, 2, 0, 0, 1, -4, -5, 0, 0}; {-4, 1, -5, 3, -5, 6, -4, -3, 5, 5, 0, 0}; {-3, 1, 6, 1, -5, -4, -4, 3, 1, -2, 0, 0}; {6, -3, 1, -5, 1, 0, 1, 6, 3, 0, 0, 0}; {-5, -1, 4, 0, 3, -3, -4, 2, 0, -2, 0, 0}; {5, 0, -4, -4, 2, -3, 1, 2, 4, -1, 0, 0}; {3, -2, 6, 6, 1, -4, 0, 1, 4, - 1, 0, 0}; {-1, 5, 0, 0, 5, 0, 4, 4, 5, 0, 0, 0}; {5, -1, 6, 6, -1, -2, 4, 6, 2, 0, 0, 0}; {-1, 5, 0, 0, 6, 0, 3, 4, 5, 0, 0, 0}; {-1, 4, -2, -2, 4, -1, -4, -4, 6, -1, 0, 0}; {-5, 1, 4, 3, -3, 3, -1, -2, -4, 0, 0, 0}; {-3, 1, 6, 5, ---1, 4, 0, -2, -3, 1, 0, 0}; {-2, 3, -3, -3, 4, -2, -5, -5, 6, -1, 0, 0}; {-5, 1, 4, 3, -2, 3, -1, -2, -4, 0, 0, 0}; {-4, 1, -5, -5, 3, -3, 6, 6, 6, -1, 0, 0}; {6, -2, 3, 2, -3, 2, -1, -3, -4, 0, 0, 0}; {3, 6, -2, -3, 3, -5, 3, 1, -2, 2, 0, 0}; {-5, -1, 4, 4, -3, 3, -1, -2, -4, 1, 0, 0}; {6, -2, 3, 3, -3, 3, -1, -2, -4, 0, 0, 0}; {5, -3, 2, 2, -4, 2, -2, -3, -5, 0, 0, 0}; {5, 1, -2, 4, -2, 0, -3, 6, -4, -1, 0, 0}; {3, -2, 6, 1, 4, 5, 1, -2, -2, 0, 0, 0}; {5, -1, -5, -1, 1, 3, -3, 3, 3, 1, 0, 0}; {4, 1, 0, -5, 1, 6, 2, 2, 5, -3, 0, 0}; {3, -1, -3, 3, -3, -1, 6, -4, -5, -1, 0, 0}; {1, -3, -5, 1, -5, -2, 6, -5, 6, -3, 0, 0}; {2, -5, 2, -5, 4, 5, 3, 2, -5, -5, 0, 0}; {-1, 3, -3, 1, 0, 4, 1, -5, 6, 2, 0, 0}; {-2, 2, -4, 0, -1, 3, 1, 6, 5, 3, 0, 0}; {5, -1, -5, 2, -5, -1, 3, 5, 4, 4, 0, 0}; {5, -1, -5, 2, -5, -1, 3, 6, 5, 4, 0, 0}; {0, 4, -2, 3, 6, 4, 0, 6, 4, 0, 0, 0}; {-3, 3, -1, 6, -5, -2, -4, -2, 3, 3, 0, 0}; {-4, -1, 4, -3, -1, -5, 3, -4, 5, 0, 0, 0}; {-5, - 2, 3, -4, -2, -5, 4, -4, 6, 0, 0, 0}; {0, 4, -2, 4, -2, -3, -1, -1, 4, 3, 0, 0}; {6, -3, 2, -5, 4, -5, -5, 3, 6, 3, 0, 0}; 6, -2, 4, -2, -4, 1, 0, 4, 4, 2, 0, 0}; {6, -2, 4, -2, -3, 2, 1, 5, 4, 2, 0, 0}; {4, -3, 4, 0, 0, 6, -5, -1, 1, -1, 0, 0}; {-1, 2, -5, 1, 0, 4, 3, 6, 5, 3, 0, 0}; {3, 5, -3, 2, 3, -1, 6, -1, -5, 1, 0, 0}; {-2, 1, 6, 0, -5, -4, -2, -2, 4, 2, 0, 0}; {-3, 2, -3, 6, -3, 3, 4, -1, -2, -3, 0, 0}; {1, 3, -5, 1, 2, -3, 4, -3, 5, 0, 0, 0}; {0, 2, 6, 0, 1, -3, 4, -3, 5, 0, 0, 0}; {-3, -1, 3, -2, 6, -2, -5, -3, -5, 5, 0, 0}; {0, 3, -4, -5, 1, 6, 1, 0, -3, 1, 0, 0}; {-4, 3, 0, 4, -4, -3, 4, 0, 0, -1, 0, 0}; {-4, 4, 2, -5, 0, 3, -2, -5, -2, 0, 0, 0}; {-5, 3, 1, 6, -1, 2, -2, -5, -2, 0, 0, 0}; 5, 1, 0, 5, 2, 2, -3, 6, -2, 0, 0, 0}; {-4, 4, 3, -3, 3, -5, 4, 5, 5, -4, 0, 0}; {4,-1, -3, 3, -3, -1, -5, -4, 6, -2, 0, 0}; 1, 5, 2, -4, -4, 1, 5, -1, 1, 0, 0, 0}; {-3, 3, 0, 6, - -1, -5, -2, 3, 2, 0, 0}; {2, 6, 1, 6, 6, -1, -2, 4, 3, 1, 0, 0}; {-1, 2, -4, 0, 0, 4, 2, -5, 5, 2, 0, 0}; {-2, 4, 1, -4, 3, -5, -1, 4, 4, 3, 0, 0}; {-5, -1, 6, -1, -3, 1, 2, -5, 4, 2, 0, 0}; {4, -4, 3, -4, -5, 0, -1, 4, 4, 1, 0, 0}; {4, -4, 3, -4, -5, 0, -1, 4, 4, 2, 0, 0}; {2, 5, -1, 3, 1, 5, 3, -4, 6, 3, 0, 0}; {1, 4, -2, 3, 1, 5, 3, -5, 6, 3, 0, 0}; {3, -4, 4,-1,-1, 5, 6, 1, 1, -1, 0, 0}; {-2, 1, -5, 0, -1, 3, 2, 6, 5, 3, 0, 0}; {-2, 4, 1, -3, 3, -5, 0, 3, 3, 3, 0, 0}; {6, -2, 5, -1, 5, 5, -4, -4, 5, 5, 0, 0}; {5, -3, 4, -2, 5, 5, -5, -4, 5, 5, 0, 0}; {5, -2, 6, 1, 0, 6, -5, 0, 2, 0, 0, 0}; {1, 4, -2, 3, 0, 4, 4, -4, 6, 3, 0, 0}; {0, 2, -5, 0, 1, -3, 4, -3, 5, 0, 0, 0}; {-2, 0, 5, -2, 0, -4, 4, -3, 6, 0, 0, 0}; {5, -5, 0, 6, 3, -5, 5, -4, 6, 5, 0, 0}; {-5, -2, 4, -1, 5, -4, -5, 3, 0, -2, 0, 0}; {-3, -1, 4, 2, 4, -1, 6, 1, 0, 4, 0, 0}; {5, -5, 1, -1, 2, -3, 4, -1, -1, 3, 0, 0}; {-2, -5, -4, 2, -3, 2, 0, 2, 3, -5, 0, 0}; {0, -5, 6, -1, 3, 6, 1, -3, - 1, -1, 0, 0}; {5, 0, -1, 5, 5, -3, 3, -2, 1, 0, 0, 0}; {1, -4, -5, 1, 3, -5, 1, -3, 0, -1, 0, 0}; {-5, 2, 1, -5, -2, 3, -3, 6, -2, 0, 0, 0}; {0, 6, 4, -2, -4, 1, 5, -1, 1, 1, 0, 0}; 1, 4, 1, -5, -3, 3, 4, -1, 0, -2, 0, 0}; {-2, 4, 2, -3, 1, 5, 4, 5, -1, 2, 0, 0}; {-3, -1, 5, -2, -1, 3, -4, 5, -1, 0, 0, 0}; {-5, -3, 3, -4, -2, 6, 1, -5, 4, -1, 0, 0}; {6, -5, 0, 4, 5, 0, -5, -1, -5, 1, 0, 0}; {0, 4, 0, -5, -1, 4, 5, 1, -1, -3, 0, 0}; {2, -3, -3, 3, 5, 1, -4, 1, -2, -1, 0, 0}; {-3, 3, 2, -4, -3, 5, -1, 3, 0, 0, 0, 0}; {-4, 2, 1, -5, -4, 4, -2, 2, 0, 0, 0, 0}; {-3, -1, 6, -4, 6, -2, 5, 1, -4, 5, 0, 0}; {1, -4, -4, 3, 2, 6, 0, -3, 0, -1, 0, 0}; {-1, 5, 4, -2, -4, 0, 5, 0, 2, 1, 0, 0}; {0, -5, -5, 2, 1, 6, 0, -4, -1, -1, 0, 0}; {-1, 6, 6, 1, 1, 6, 0, -4, -1, -1, 0, 0}; {-4, 2, 1, -5, 6, -1, 3, -2, 1, 0, 0, 0}; {-3, 4, 4, -1, -1, 5, -2, 6, -2, -2, 0, 0); {-4, 3, 3, -2, -2, 4, -2, 6, -2, -1, 0, 0}; {-4, 3, 3, -2, -1, 4, -2, -5, -1, -1, 0, 0}; {-5, 1, 0, 6, 6, -2, 4, -1, 1, 0, 0, 0}; {-4, 3, 3, -2, -1, 4, -1, -5, -1, -1, 0, 0}; {3, 5, 0, 3, -4, 4, 2, -5, 5, -1, 0, 0}; {-3, 3, 2, -3, 6, -3, 3, 0, 1, -1, 0, 0}; {1, 4, 0, -5, -1, 4, 5, 1, -1, -4, 0, 0}; {-3, -2, 4, -2, -1, -5, 2, -5, 4, -1, 0, 0}; {-4, 2, 2, -5, -3, 4, -2, 3, 0, 0, 0, 0}; {5, -3, -5, -1, -3, 4, -4, -3, 5, 4, 0, 0}; {-5, 3, 5, 1, 3, -4, 4, 3, -5, -4, 0, 0}; {6, 0, 0, 6, -5, 3, -2, 2, -1, 0, 0, 0}; {6, 0, 0, 6, -5, 3, -2, 3, -1, 0, 0, 0}; {-4, 2, 2, -4, 6, -2, 4, -1, 1, 1, 0, 0}; {-5, 1, 1, 5, 2, -4, 5, -3,3, --2, 1, 1, 0, 0}; {6, 0, 0, 6, 5, -3, 2, -2, 1, 0, 0, 0}; {6, 0, 0, 6, 5, -3, 3, -2, 1, 0, 0, 0}; {4, -2, -2, 5, 3, -4, 2, -3, 0, 0, 0, 0}; {6, 3, -5, 2, -4, 6, 5, 3, 6, -5, 0, 0}; {-3, -5, 0, -3, 4, - 4, -2, 5, -5, 1, 0, 0}; {-4, 3, 5, -1, -5, 2, 6, -5, 0, 0, 0, 0}; {4, -2, -1, 5, 4, -4, 2, -2, 0, 0, 0, 0}; {-1, 4, 4, -3, -2, 6, 0, 3, 0, 1, 0, 0}; {0, -5, -3, 4, -4, 5, 1, -5, -5, -2, 0, 0}; 5, 2, -4, -2, -2, 3, 0, 4, -4, 3, 1, 2, 0, 0}; {0, 6, -5, 2, 0, 5, 0, -4, -1, 0, 0, 0}; {-2, 3, 3, -3, -5, -1, 4, -1, 2, 1, 0, 0}; {3, -4, -4, 2, -2, 1, -5, 3, 1, 1, 0, 0}; {2, -4, -3, 4, 1, 6, 1, -3, -1, 0, 0, 0}; {0, 4, 3, -4, 3, 6, -1, 6, 4, 2, 0, 0}; {-5, 5, -1, 1, -2, 3, -4, 1, 1, -3, 0, 0}; {-1, -3, 3, -4, 6, 3, -2, 0, -5, -1, 0, 0}; {-4, 4, -4, 1, -5, -4, 6, 4, -5, -5, 0, 0}; {6, 5, 0, -4, -5, 0, 5, 1, 5, -1, 0, 0}; {5, 3, -3, 4, 2, 6, -1, -5, -4, 1, 0, 0}; {3, 1, -5, 2, 1, 5, -3, 4, -5, 1, 0, 0}; {4, -1, 2, 5, 0, -1, -3, -5, -4, -3, 0, 0}; {3, 2, 1, -5, 1, -2, -4, 6, -5, -3, 0, 0}; {-4, 1, 2, -5, -4, 4, -2, 5, 0, 1, 0, 0}; {2, -4, -2, 4, 0, 5, -3, -3, 1, -1, 0, 0}; {5, -2, -1, 5, 2, -3, 3, 6, 2, 0, 0, 0}; {2, 5, 4, -2, 3, -2, 0, -2, -3, 5, 0, 0}; {-5, -1, 0, -5, 2, -2, 3, 6, 2, 0, 0, 0}; {3, 1, -4, -2, -4, 1, 6, -1, 0, -4, 0, 0}; {2, -1, 5, -2, -5, 5, 0, 1, -4, -1, 0, 0}; {2, 0, -5, 2, 0, 4, -4, 3, 6, 0, 0, 0}; {0, -2, 5, 0, -1, 3, -4, 3, -5, 0, 0, 0}; {4, -1, 3, -4, 2, -1, 4, 6, 5, 2, -4, -4, 0, 0}; {2, 4, 1, 3, -3, 5, 0, -3, -3, -3, 0, 0}; {4, -2, 1, 6, 0, -1, -5, -4, -3, 0, 0}; {-1, 5, -4, 1, -5, 3, -1, -4, -4, -3, 0, 0}; {-2, 4, -5, 0, 6, 2, -1, -4, -4, -3, 0, 0}, {3, -3, 0, 6, 5, 1, 5, 2, -3, -2, 0, 0}; {5, 2, -4, 5, 1, 5, -4, 4, 6, 0, 0, 0}; {3, 3, 0, 1, -5, 0, 6, 2, -4, -4, 0, 0}; {4, -4, -3, 3, -3, 5, -4, -5, -5, 4, 0, 0); {-1, 3, 5, -1, 5, 2, 6, 5, 6, 3, 0, 0}; {-3, 1, 3, -3, 3, 1, 6, 4, 5, 1, 0, 0}; {-4, -1, 0, 5, -1, 6, -2, -2, -5, 3, 0, 0}; {-5, -1, 1, -4, 2, 3, 6, 4, 1, 0, 0}; {5, -3, -1, 6, 1, -2, 2, 5, 2, 0, 0, 0}; {4, -4, -2, 5, 0, -3, 2, 5, 2, 0, 0, 0}; {4, -3, 0, -4, 4, 3, -4, 0, 0, 1, 0, 0}; {4, -2, 2, -1, -1, 6, -1, -3, -5, -4, 0, 0}; {0, -3, 4, 5, -1, 6, -1, 0, 3, -1, 0, 0}; {0, -2, 6, 0, -1, 3, -4, 3, -5, 0, 0, 0}; {-1, -3, 5, -1, -2, 3, -4, 3, -5, 0, 0, 0}, {-5, 2, -5, -1, 6, -5, 6, 4, -5, -5, 0, 0}; {-5, 3, -3, 2, -2, 0, 1, 0, 4, 5, 0, 0}; {-3, -5, 3, -2, -3, 1, 6, 1, 5, {-5, -1, 0, 0}; {-3, 5, -1, 5, {-5, -1, 1, 2, 1, 4, 5, 0, 0}; {-4, 4, -2, 4, -2, 1, 2, 1, 4, 5, 0, 0}; {-5, 3, -3, 3, -2, 0, 1, 0, 4, 5, 0, 0}; {4, -1, 4, -3, 4, 5, 5, 3, 6, 6, 0, 0}; {1, -4, 1, 6, 1, 2, 6, 5, 1, -1, 0, 0}; {2, -3, 2, -5, 3, 4, 4, 2, 6, 6, 0, 0}; {5, 2, -3,

4, 2, 5, -4, 4, 6, 0, 0, 0}; { 4, 1, -4, 3,1, 5, -3, 4, -5, 0, 0, 0}; {-5, 3, -3, 5, 3, -5, -3, 4, 6, 0,0, 0}; {-2, 6, 0, -4, 4, -5, -2, 5, -5, 0, 0, 0}; {3, -2, 3, -1, 0, 6, -2, -3, -5, -4, 0, 0}; {0, -5 - 0, -4, 1, 3, 2, 1, 5, 5, 0, 0}; {-1, 6, 0, -4, 3, 2, 2, -4, -1,2, 0, 0}; {6, 1, -5, 3, -5, 6, -5, -2, 3, 4, 0, 0}; {- 1, 5, -2, 6, -1, 2, 2, 0, 4, 4, 0, 0}; 3, 2, 6, 1, -4, -5, -1, 2, 2, 0, 0, 0}; 5, 2, -4, -1, 2, -4, 2, 0, 3, 6, 4, 1, 0, 0}; {5, -1, 4, 1, -2, -3, 3, -4, -2, -1, 0, 0}; {0, -4, 3, 3, -4, -4, 0, 4, 0, 1, 0, 0}; {-.5, 3, -2, -2, 4, -2, 2, 3, 5, 0, 0, 0}; {6, 2, -3, 3, -3, 1, 2, 4, 0, 0, 0}; {5, 1, -4, -4, 3, -3, 1, 2, 4, -1, 0, 0}; {6, 2, -3, -2, 3, -2, 1, 3, 4, 0, 0, 0}; {4, -1, 5, 5, -3, 3, 6, 6, 6, 1, 0, 0}; {5, 1, -4, -3, 2, -3, 1, 2, 4, 0, 0, 0}; {5, 1, -4, -3, 3, -3, 1,2, 4, 0, 0, 0}; {2, -3, 3, 3, -4, 2, 5, 5, 6, 1, 0, 0}; {1, -4, 2, 2, -4, 1, 4, 4, 6, 1, 0, 0); {1, -5, 0, 0, 6, 0, -3, -4, -5, 0, 0, 0}; {-5, 1, 6, 6, 1, 2, -4, 6, -2, 0, 0, 0}; {1, -5, 0, 0, -5, 0, -4, -4, -5, 0, 0, 0}; {-3, 2, 6, 6, -1, 4, 0, -1, -4, 1, 0, 0}; {-5, 0, 4, 4, -2, 3, -1, -2, -4, 0, 0, 0}; {6, -1, 3, 3, -2, 3, -1, -3, -4, 1, 0, 0}; {1, -3, 6, 0, 3, -1, 2, 3, 3, -4, 0, 0}; {6, 3, -1, 5, -1, 0, -1, -1, 6, -3, 0, 0}; {6, 2, -3, 2, -4, -1, 3, 4, -1, -1, 0, 0}; (3, -2, 4, -4, 3, 4, 5, 3, 6, 6, 0, 0}; {4, -1, 5, -3, 5,6, 4, 3, -5, -5, 0, 0}; {1, -4, 2, 6, 2, 3, 4, 2, 6, 6, 0, 0}; {1, -4, 2, -5, 3, 4, 3, 2, 6, 6, 0, 0}; {-2, 5, -1, 4, 1, 2, 2, 1, 5, 6, 0, 0}; {5, -1, 4, -3, 5, 6, 5, 3, -5, -5, 0, 0}; {-5, 3, -2, 5, 3, 6, -3), 4, 6, 0, 0, 0}; {-3, 4, -2, 4, -1, 1, 2, 1, 4, 5, 0, 0}; {-5, 2, -4, 2, -2, 0, 1, 0, 4, 5, 0, 0}; {-3, 5, 0, -5, 4, -5, -2, 5, -5, 0, 0, 0}; {6, 0, 5, -1, -5, -5, 5, 4, -4, -4, 0, 0}; {2, -4, 1, -5, 3, 4, 4, 2, 6, 6, 0, 0}; {2, -4, 1, -5, 4, 4, 4, 2, 6, -5, 0, 0}; {-1, 6, 0, -5, -2, -4, -3, -1, 5, 5, 0, 0}; {-1, 6, 0, -5, -2, -3, -3, -1, 5, 5, 0, 0}; {-4, 3, -3, 4, -4, -5, -4, -2, 5, 5, 0, 0}; {-5, 2, -4, 3, -5, 6, -5, -3, 5, 5, 0, 0}; {-5, 2, -4, 3, -4, -5, -5, -1, 2, 4, 0, 0}; und {-2, 5, -1, 6, -1, 2, 3, 1, 4, 5, 0, 0};
{-3, 2, -5, 0, -1, -3, -5, 5, -3, -4, 0, 0}; {6, 0, 6, 0, 4, -5, -4, 2, 0, -2, 0, 0}; {0, 0, 0, 1, 10, 8, 5, 0, 4, 9, 10, 2}; 31, -5, 1, -3, -5, -1, -1, 6, -5, 1, 0, 0}; (-4, 1, 6, 1, -2, 6, 0, 2, 4, 3, 0, 0}; {-3, 1, 5, 0, -5, -3, -4, 3, 0, -2, 0, 0}; {4, 5, 6, -2, 3 -1, 4, -1, -2, 4, 0, 0}; {-4, -1, 2, --4, 6, -2, -4, -5, -4, 3, 0, 0}; {-2, 3, -4, 4, 5, 6, 1, 1, -3, -5, 0, 0}; {0, 0, 0, 4, 8, 11, 9, 6, 10, 5, 0, 11}; {2, -4, 2, 1, 6, 4, -5, 1, 3, 1, 0, 0}; {5, 3, 1, 5, 1, 3, -2, 5, 6, -3, 0, 0}; {4, 6, -4, 4, -3, 6, 0, 6, 6, 3, 0, 0}; {-4, 0, 4, 3 -2, 3, -1, -2, -5, 0, 0, 0}; {-5, -5, -5, 2, 6, -2, 6, 4, -3, 6, 0, 0}; {-2, -4, 6, 0, 5, -3, -5, 3, -4, -1, 0, 0}; {1, -2, -5, 0, 5, 0, 3, 2, 4, 6, 0, 0}; {2, -3, 4, -4, -5, 6, -1, -1, 3, 5, 0, 0}; {4, 0, -4, 2, 1, 4, -4, 3, 5, 0, 0, 0}; {3, -2, 5, -2, 0, -2, -3, 3, 3, -2, 0, 0}; {5, -1, 5, -2, 0, 0, -1 0, -4, 6, 0, 0};

{6, 1, -3, 3, -4, 0, 4, 6, 6, 5, 0, 0}; {6, 0, -5, 1, 0, 2, 0, 0, 5, 5, 0, 0}; {-1, 6, 2, -2, 3, -4, 0, 3, 3, 3, 0, 0}; {-1, 5, 0, -5, 3, 2, 2, -5, -2, 1, 0, 0}; {1, 6, 0, -5, 4, -2, 0, 3, 3, 3, 0, 0}; {0, 0, 1, 3, 11, 7, 11, 4, 5, 0, 0, 7}; {6, -3, 1, -5, -2, -5, 3, -4, 6, 1, 0, 0}; {0, 2, 5, -2, 5, 3, 3, -3, 4, 0, 0, 0}; {-4, 1, -5, 4, -4, -5, -4, -2, 5, 4, 0, 0}; (2, 4, -5, 1, 5,0, -5, 5, 3, -1, 0, 0}; {0, 0, 1, 5, 9, 2, 10, 3, 0, 8, 4, 41, {-2, -1, 1, -5, 3, 6, 2, 0, -1, 6, 0, 0}; {0, 0, 1, 6, 3, -1, 4, 6, 1, 5, 0, 0}; {-5, 1, -4, -5, -1, 5, -5, -5, -4, 2, 0, 0}; {1, -5, 2, 1, 5, 0, 1, -3, -5, -4, 0, 0}; {-4, 0, 5, 2, -3, -4, 4, -2, 1, 1, 0, 0}; {0, 0, 1, 6, 11, 3, 10, 7, 4, 11, 2, 1}; {5, -1, 6, 6, 5, 2, -5, 4, 6, -4, 0, 0}; {-2, -5, 5, -4, 4, 6, 1, 6, -4, -4, 0, 0}; {-4, 3, -1, 0, 6, 6, -1, 3, -1, -1, 0, 0}; {0, 0, 1, 9, 0, 1, 6, 1, 8, 8, 5, 0}; {0, 0, 1, 9, 2, 5, 4, 8, 5, 1, 0, 6}; {-1, -5, 4, -4, 3, 5, 0, 6, -5, -1, 0, 0}; {0, 0, 1, 10, 1, 8, 11, 3, 2, 3, 7, 2}; {2, -4, 3, -5, -5, 5, -2, 0, 4, 4, 0, 0}; {2, -4, 3, -5, -5, 5, -1, 0, 3, 4, 0, 0}; {0, 0, 2, 0, 8, 9, 6, 10, 3, 9, 9, 2}; {-3, 1, -5, -2, -2, 3, -1, 6, 5, 1, 0, 0}; 3, -4, 3, -4, 5, 5, 2, 2, -4, -3, 0, 0}; {-1, 0, 3, 4, -1, -5, 2, -5, 2, 3, 0, 0}; {-5, 0, -5, 1, 3, -4, -4, 2, 1, 0, 0, 0}; {4, -5, 0, 4 4, 2, 6, 3, -4, 6, 4, 0, 0); {0, 4, -2, 4, -3, -4, -1, -2, 6, 5, 0, 0}; {5, -4, 1, 6, 1, -1, 1, 0, 6, 3, 0, 0}; {-1, 6, 3, 1, 6, -1, -2, 0, -5, -1, 0, 0}; {3, 6, 1, 5, 0, -2, 0, -2, -4, -5, 0, 0}; {3, -3, 5, 2, 2, -3, 1, -5, -3, -1, 0, 0}; {4, -5, 0, -5, -4, 0, 2, 1, 5, 1, 0, 0}; {-3, 0, 5, 0, -5, -3, -5, 3, 0, -2, 0, 0}; {0, 0, 2, 7, 6, 4, 11, 8, 5, 9, 4, 7}; {-3, 0, 5, 2, -5, 3, -1, -2, 2, 2, 0, 0}; {-1, -1, 1, -4, 6, -3, 3, -2, -1, 5, 0, 0}; {3, 6, -1, -2, 3, -5, 3, 1, -2, 2, 0, 0}; {3, -1, -3, 1, 2, 5, 3, -5, 1, 4, 0, 0}; 0, 0, 2, 10, 4, 0, 11, 9, 6, 0, 3, 5}; {4, -2, 6, -3, -4, 6, 1, 0, 3, 6, 0, 0}; {-1, 0, 3, 1, 0, -5, -2, 5, 1, 6, 0, 0}; {0, 0, 2, 11, 10, 4, 6, 9, 3, 8, 2, 9}; {0, 0, 2, 11, 11, 5, 6, 2, 5, 10, 6, 1}; (-5, -2, 4, 4, -2, 3, 0, -2, -4, 0, 0, 0}; {6,6, -3, -5, 3, -2, 2, -4, 3, 5, 0, 0}; {0, -4, -5, 1, -5, -2, 5, -4, -5, -1, 0, 0}; {-4, 4, 3, -2, 1, 5, -1, -4, -1, -2, 0, 0}; {2, -5, 3, -4, 3, 3, 6, -5, 4, 5, 0, 0}; {0, 0, 3, 3, 7, 1, 5, 3, 1, 11, 7, 11}; {0, 0, 3, 3, 11, 8, 5, 7, 3, 6, 11, 4}; {1, 6, 2, -4, -2, 0, -2, -1, 4, 3, 0, 0}; {0, 0, 3, 4, 11, 1, 7, 10, 5, 11, 6, 3}; {2, -2, -3, -5, 0, 5, -4, -4, 1, -3, 0, 0}; {-3, 5, 4, 3, -3, 2, 5, -5, 0, -3, 0, 0}; {0, 0, 3, 6, 5, 2, 7, 4, 3, 1, 7, 0}; {-3, 1, -4, 3, 6, -2, -3, 5, 1, -1, 0, 0}; {-1, 2, -4, 2, -4, 6, 1, 2, -2, -2, 0, 0}; {-1, 2, -4, 2, -4, -4, -1, -2, 4, 2, 0, 0}, {0, 0, 3, 8, 2, 2, 9, 7, 6, 2, 6, 3}; {0, 0, 3, 8, 10, 7, 4, 3, 8, 4, 8, 6}; {3, 2, 4, -3, 6, -1, 5, 0, 1, 5, 0, 0}; {2, 1, 3, -4, 5, -2, 5, 0, 1, 5, 0, 0}; {-5, 3, 2, 5, 3, 0, 4, -3, 5, -4, 0, 0}; {-3, 0, 6, 5, 0, 2, -4, 4, -1, -1, 0, 0}; {0, 0, 4, 0, 6, 1, 9, 7, 6, 2, 5, 8}; {-2, 1, -4, -4, 4, -4, 3, -1, -4, -2, 0, 0}; {0, 0, 4, 1, 8, 3, 5, 3, 2, 9, 11, 4}; (5, 1, 1, 6, -1, 2, -2, -5, -3, -3, 0, 0}; {-5, 4, 5, -1, 6, -5, 1, 5, 5, -2, 0, 0}; {6, 3, 4, 0, 6, 4, -2, 4, 6, -2, 0, 0}; {-5, 6, -3, -5, 3, -1, 2, -2, 3, 6, 0, 0}; {-2, 2, -2, 1, 5, -2, -2, 6, 4, -1, 0, 0}; {-5, -1, -5, -2, 4, -1, -4, 4, 5, 6, 0, 0}; {6, 6, -2, -3, 4, -2, 5, -3, 3, 3, 0, 0}; {3, 3, -5, -5, 1, -3, 3, -4, 2, 3, 0, 0}; {1, 4, -1, 4, -3, -3, 0, -2, 6, 2, 0, 0}; {6, 1, 0, -2, 3, -5, -2, -3, 2, -2, 0, 0}; {3, -5, -3, -1, -5, 6, 2, 5, -2, 0, 0, 0}; {0, 1, 6, -1, 6, 3, 4, -1, -2, 2, 0, 0}; (0, 0, 4, 8, 6, 2, 2, 11, 3, 4, 0, 5}; {-1, 6, 5, 4, -2, 1, -2, 0, 1, -4, 0, 0}; {6, -4, 2, -4, -1, 4, 1, -5, 3, 0, 0, 0}; {0, 4, 0, -4, 2, -2, -2, 6, -4, 0, 0, 0}; {0, 0, 4, 8, 10, 3, 11, 4, 2, 2, 11, 6}; {-3, 1, -3, 6, -4, 5, -1, -5, -4, 0, 0, 0}; {1, 3, -3, 4, 6, -3, 2, 0, 5, 1, 0, 0}; {0, 0, 4, 10, 2, 4, 7, 6, 10, 7, 5, 3}; {1, 4, -1, -3, -1, -4, 5, -2, -2, -5, 0, 0}; {0, 0, 4, 11, 11, 0, 11, 9, 3, 5, 2, 8}; {5, 1, 2, 6, 0, 2, -2, 6, -3, -4, 0, 0}; {3, -3, -4, -1, 3, -2, -5, -5, -1, 4, 0, 0}; {0, 0, 5, 2, 1, 2, 1, 9, 6, 10, 3, 8}; {0, 0, 5, 2, 1, 5, 2, 5, 0, 10, 0, 7}; {2, -4, -5, -1, 2, -4, -4, 4, -1, 1, 0, 0}; {5, 2, 4, -1, 5, 6, 1, 5, 5, -3, 0, 0}; {5, 0, 0, 5, -4, 3, 5, 1, -3, 0, 0, 0}; {0, -3, -1, -5, 2, -3, -4, 3, -5, -2, 0, 0}; {0, -4, -3, 4, -2, -5, 1, 6, -5, -1, 0, 0}; {-3, -5, -2, -4, 4, -4, 1, 6, -4, 6, 0, 0}; {3, 6, 2, 5, -5, 2, -2, 5, 5, 5, 0, 0}; {2, ,4, -5, 1, 1, -5, 2, 6, 1, 1, 0, 0}; {-4, 2, 1, -4, -2, 3, -3, 6, -2, 0, 0, 0}; {-5, 4, 6, 4, -3, 0, -4, 2, 2, -4, 0, 0}; {-3, -1, 6, -3, 1, 0, 4, 2, -5, 3, 0, 0}; {-1, 4, 2, -3, -4, 0, 6, -2, 2, 0, 0, 0}; {-1, 0, 6, -3, 6, -2, 6, -1, -4, 6, 0, 0}; {-3, -1, 6, -2, 3, 1, 0, 5, 3, -2, 0, 0}; {-4, -1, -5, 1, 0, 5, 0, 3, 5, 4, 0, 0}; {0, -1, 3, 5, 4, -1, 4, 5, 0, 4, 0, 0}; {-1, -1, 4, -5, -4, 3, -2, 1, -3, 2, 0, 0}, {2, -4, -4, -1, 2, -3, -4, 4, -1, 2, 0, 0}; {-3, -5, -1, -5, 4, 3, -3, I, 5, 2, 0, 0}; {-3, 1, -1, 1, 5, 1, 3, 5, 3, 4, 0, 0}; {--2, -3, 2, -1, 3, 4, -3, 2, 5, 2, 0, 0}; {-4, -5, 0, 2, 4, -3, 3, 6, 2, -5, 0, 0); {0, 0, 6, 5, 8, 6, 6, 8, 1, 6, 11, 7}; {-5, 5, -3, 6, -4, 1, -3, 1, 4, 6, 0, 0}, {-4, 1, 0, 5, 1, 4, -2, 4, 4, 1, 0, 0}; {6, -3, 6, -3, 3, 6, -5, -1, -5, 4, 0, 0}; {4, 2, 6, 4, 6, 0, -4, 0, 3, 6, 0, 0}; {-4, 2, 2, -4, 6, -1, 4, -1, 0, 0, 0, 0}; {-4, 6, -2, -3, 1, -5, 0, 3, 6, 3, 0, 0}; {0, 0, 6, 7, 5, 5, 0, 4, 6, 3, 10, 4}; {-4, -1, -4, 1, -3, 2, 3, -3, 4, 3, 0, 0}; (4, -5, 4, -3, 2, 4, -2, -4, 4, 0, 0, 0}; {-2, 4, 4, 1, -2, 3, 4, -4, 1, -2, 0, 0}; {4, -5, 4, -2, -2, 3, -2, 1, 4, 3, 0, 0}, {0, 0, 6, 9, 6, 10, 5, 9, 8, 1, 11, 9}; {0, 0, 6, 9, 11, 3, 11, 3, 0, 1, 9, 4}; {0, 0, 6, 10, 2, 1, 4, 0, 8, 8, 11, 8}; {-2, -3, 2, 6, 1, -5, -3, 3, 1, -2, 0, 0}; {6, 4, -3, 2, -2, 5, 5, -2, 0, 3, 0, 0}; {4, 2, -5, 0, -3, 6, 0, 2, -4, 0, 0, 0}, {3, 0, 4, -2, 0, 6, 0, -3, -5, -3, 0, 0}; {0, 0, 7, 5, 0, 9, 2, 9, 3, 6, 4, 5}; {-3, 5, -4, 2, 2, -2, 2, -1, -4, -3, 0, 0}, (-2, -3, 3, 1, -4, -3, 4, -4, 2, -2, 0, 0}, {-1, 6, -4, 2, -5, 3, 0, -4, -3, -2, 0, 0); {-3, 2, 2, 6, -1, -5, 3, 3, 0, 3, 0, 0}; {0, 0, 7, 6, 9, 3, 3, 1, 3, 5, 1, 5}; {-3, -5, 0, -2, 2, 4, -3, 2, 5, 2, 0, 0}, {1 -3, 0, -4, 1, -2, -4, 4, -5, -3, 0, 0}; {-3, 6, -2, -5, -4, 2, -2, 1, 4, 6, 0, 0}; {0, 0, 7, 8, 2, 1, 9, 4, 9, 7, 8, 10}; {0, 3, 1, 5, -2, 3, 4, -3, 5, 2, 0, 0}; {-2, 4, 5, 1, -2, 4, 4, -4, 1, - 1, 0, 0}; {-5, 0, 0, -5, 4, -3, -5, -1, 3, 0, 0, 0); {4, -1, 1, -2, 6, -3, -5, -1, -1, -5, 0, 0}, {-4, 0, -1, 6, 0, 1, -5, 3, 5, 1, 0, 0}, {0, 0, 7, 11, 5, 3, 6, 3, 0, 0, 4, 3}; {0, 0, -5, -1, 6, -4, 1, -3, 6, -1, 0, 0}; {0, 0, 7, 11, 10, 11, 4, 3, 7, 0, 8, 8}; {-4, 5, -2, 0, 6, -4, 5, 2, -3, 0, 0, 0}; {0, 4, 4, 2, 2, -3, -1, 4, -2, -5, 0, 0}; {0, 0, 8, 3, 3, 2, 4, 10, 2, 0, 8, 0}; {2, 1, -4, 2, 3, -3, 3, 6, 4, -2, 0, 0}; {4, 2, -4, 2, 5, 1, 6, 5, 5, 6, 0, 0}; {1, -3, 1, 6, 6, -3, {0, -2, 3, 0, 0}; {2, -1, 4, -1, 6, 5, 1, 2, -4, -1, 0, 0}; {4, 2, -4, 4, 1, 5, -4, 4, 6, 0, 0, 0}; {1, -3, 1, -4, 0, -3, -3, 0, 6, 6, 0, 0}; {-3, 5, -3, 4, -2, -4, 6, 4, -5, -4, 0, 0}; {-2, -5, 0, -4, 6, 5, -4, -1, 5, -3, 0, 0}, {0, 0, 8, 8, 0, 10, 8, 2, 7, 2, 9, 0}; {3, -3, -1, 5, 5, 1, 5, 1, -3, -1, 0, 0); {-4, -5, 2, 1, 6, -3, -3, 1, -1, 0, 0}; {0, 0, 8, 8, 2, 8, 3, 10, 2, 0, 2, 4}; {6, 2, -2, 2, 3, -2, 3, 3. 3, 2, 0, 0}; {-5, 6, 1, 0, 2, -1, 4, -1, 2, -5, 0, 0}; {-2, 1, 0, 3, -3, 1, 5, -2, -5, 4, 0, 0}; {-3, 1, 1, 6, 3, -1, 4, 6, 3, 2, 0, 0}; {6, -1, 0, 6, 5, 4, 2, -3, 1, 0, 0, 0}; {-3, 3, 5, 0, -4, 1, -2, -4, -3, 4, 0, 0}; {-4, 0, 0, 6, 0, -5, -2, -4, -4, 5, 0, 0}; {0, 0, 8, 10, 0, 7, 2, 0, 4, 8, 6, 9}; {4, 1, 6, 5, -3, 5, -2, 2, 5, 2, 0, 0}; {0, 0, 8, 11, 9, 4, 11, 2, 6, 3, 5, 10}; {0, 0, 9, 0, 5, 10, 10, 10, 3, 11, 5, 3}; {-4, 6, 1, 2, -4, 4, -3, -1 , 2, -1, 0, 0}; {-1, 5, -4, 6, 1, 6, 4, -4, -3, 3, 0, 0}; {0, 0, 9, 2, 3, 1, 9, 1, 10, 5, 6, 9}; {3, 3, 0, 5, -5, 4, -3, 2, 1, 6, 0, 0}; 5, 2, 6, -5, -4, -2, 4, -3, 5, 3, 0, 0}; {0, 0, 9, 3, 10, 3, 4, 1, 4, 9, 10, 1}; {-5, 4, -2, 2, -3, -1,3, 3, 1, -2, 0, 0}; {-2, -3, 5, -1, -2, 3, -4, 3, -5, 0, 0, 0}; {6, 5, 1, -5, -5, 0, 5, 1, 6, -1, 0, 0}; {5, 4, 0, -5, 3, -4, 2, 5, -4, 0, 0, 0}, {-1, 6, -2, 1, -3, -2, -5, 4, -5, -5, 0, 0}; {0, 0, 9, 5, 10, 0, 5, 1, 6, 6, 8, 4}; {3, -2, 2, 5, 5, 5, 6, 1, 6, 4, 0, 0}; {0, 0, 9, 5, 11, 11, 0, 4, 8, 3, 6, 7}; {-4, 3, -5, -1, -5, -4, 6, 4, -5, -5, 0, 0}; {3, -5, -4, -3, 3, -2, -5, 5, 0, 3, 0, 0}; {0, -5, -1, 4, 4, 0, 3, 1, -3, -3, 0, 0}; 0, 5, -5, -2, -1, -3, -4, 3, -3, 3, 0, 0}, {0, 0, 9, 8, 2, 5, 0, 6, 7, 11, 9, 2}; {-2, -2, -5, 6, 0, 5, -1, 4, -3, -3, 0, 0}; {2, -2, 3, -2, 4, 5, 2, 2, 5, 5, 0, 0}; {3, -3, 0, 6, 5, 1, 4, 1, -3, -2, 0, 0}; {2, -2, 3, -1, 6, 5, 1, 2, -4, -1, 0, 0}; -5, -1, 0, 4, -2, 5, 2, 2, -2, 2,0, 0}; {4, -5, -5, -1, 4, -1, 2, 0, -2, 5, 0, 0}; {1, 3, 2, 6, 0, -5, -1, -1, 5, 3, 0, 0}; {-5, 2, 6, 3, 4, 6, -1, 0, -3, 6, 0, 0}; {6, -3, -2, 3, -3, 4, -3, -2, 6, 2, 0, 0}; {-4, 0, 2, -3, 3, 0, 4, 6, 3, 1, 0, 0}; {0, 0, 10, 1, 8, 1, 4, 5, 10, 10, 4, 1}; {-4, 2, 6, 3, 4, 6, -1, 0, -3, 6, 0, 0}; {3, -2, 3, 2, -3}, 2, 4, 5, -5, 1, 0, 0}; {0, 0, 10, 2, 3, 8, 9, 10, 6, 1, 7, 0};

{2, -4, 0, -2, 6, 6, 1, -4, -2, 0, 0, 0}; {-1, -1, -3, 1, -5, 4, 1, -1, 5, -3, 0, 0}; {1, -4, 1, 0, 2, -2, 2, 5, -5, 4, 0, 0}; {4, -1, 4, 4, -1, 0, -4, 5, -2, 0, 0, 0}, {4, 0, 6, -5, 44, -5, -1, 4, 3, -2, 0, 0}; {1, 6, -3, -4, 2, 6, 2, -1, -2, 2, 0, 0}; {3, -1, 5, -5, 6, -1, 2, 1, 0, 4, 0, 0}; {0, 5, -4, -4, 1, 6, 1, -2, -3, 2, 0, 0}; {0, 0, 10, 5, 5, 10, 3, 9, 10, 10, 2, 9}; {5, 3, -1, 4, 4, -1, 4, -5, 5, -2, 0, 0}; {3, 0, -5, 0, -5, -2, 1, 0, 3, 4, 0, 0}; {1, -{1, -5, 2, -4, -3, -2, 4, -4, 0, 0, 0}; {0, 0, 10, 7, 3, 8, 3, 7, 6, 8, 11, 4}, {-3, 4, -3, 1, 5, 2, -1, 0, -2, 4, 0, 0}; {-3, 6, 1, -5, 1, 1, -1, 2, 5, -1, 0, 0}; {5, -3, -1, 1, 2, 5, 2, 3, 0, 4, 0, 0}; {-5, 4, -1, 6, -3, 6, 5, 3, -5, -2, 0, 0}; {1, 0, -3, -4, 1, 5, -2, 5, -2, -3, 0, 0}; {0, 0, 10, 11, 0, 2, 6, 10, 8, 3, 10, 3}; {-2, 4, -4, 3, -4, -5, -1, -1, 3, 3, 0, 0}, 4, 2, -5, 2, -3, 6, 5, -2, 0, 2, 0, 0}; {-1, 6, 0, -4, 4, 2, 6, -4, -2, 1, 0, 0}; {0, 0, 11, 1, 3, 9, 8, 5, 1, 6, 0, 8}; {6, 1, -5, 4, 4, -1, 3, -5, -4, 0, 0, 0}, {-4, 2, -5, 3, 4, 6, 0, 0, -3, -5, 0, 0}, 0, 0, 11, 4, 1, 7, 8, 1, 3, 9, 0, 9}; {1, 4, -4, -5, 1, 4, 2, -1, -3, 2, 0, 0}; {-1, 1, 2, -2, 2, -1, 3, -3, 6, 5, 0, 0}; {0, 0, 11, 6, 1, 0, 4, 7, 10, 5, 8, 4}; {-5, 2, -4, -2, 1, 3, -3, 5, 1, 1, 0, 0} {-5, 3, -2, 1, -4, -1, 3, 3, -1, -2, 0, 0}; {-4, 4, -1, 3, -2, 1, 3, 2, 4, 5, 0, 0}; {3, -3, 2, 4, -3, 5, 3, 4, -1, -2, 0, 0}; {0, 0, 11, 7, 8, 4, 11, 10, 2, 2, 9, 2}; {5, 2, -2, 3, 1, 1, -4, -2, 5, -3, 0, 0}; 6, 3, -1, 5, -5, 3, 6, 5, 5, -2, 0, 0}; {1, -4, 2, 6, -4, 3, 1, 0, -2, -3, 0, 0}, {-5, 4, 0, -5, -5, 5, -5, 2, 5, -2, 0, 0}, (2, -1, -5, 2, 6, 3, 2, 2, -5, -2, 0, 0}; {0, 0, 11, 9, 4, 9, 3, 9, 3, 4, 8, 8}; {5, 1, -4, 2, -4-1, 1, 0, 3, 4, 0, 0}; {6, 0, 5, -3, 5, 5, 5, 3, -3, -4, 0, 0}; {-5, 1, 6, 0, -4, 5, 5, -3, 0, {0, 0}; {2, -2, 1, 2, -3, 1, 6, -4, -1, 0, 0}; und {1, -4, 2, -3, -1, -2, -3, 0, 5, 6, 0, 0}; und

{0, 0, 0, 0, 3, 6, 0, 10, 6, 3, 8, 1}; {0, 0, 11, 3, 3, 9, 6, 2, 4, 11, 2, 9}; {0, 0, 3, 0, 9, 4, 3, 3, 9, 1, 8, 0}; {0, 0, 3, 1, 10, 11, 8, 2, 6, 1, 2, 7}; {0, 0, 3, 1, 11, 6, 7, 1,4, 11, 7, 11}; {0, 0, 3, 6, 10, 8, 8, 3, 11, 9, 0, 8}; {0, 0, 3, 7, 1, 4, 7, 6, 4, 0, 5, 2}; {0, 0, 4, 8, 8, 3, 9, 0, 7, 1, 10, 10}, {0, 0, 6, 5, 3, 5, 1, 5, 1, 8, 1, 2}; {0, 0, 6, 6, 1, 3, 4, 4, 5, 0, 6, 0}; {0, 0, 6, 8, 1, 3, 1, 4, 9, 5, 11, 8}; {0, 0, 7, 8, 8, 6, 2, 9, 6, 10, 3, 9}; {0, 0, 7, 8, 10, 9, 11, 2, 9, 1, 8, 4}; {0, 0, 8, 4, 4, 9, 3, 0, 5, 11, 2, 2}; {0, 0, 8, 5, 7, 10, 2, 10, 0, 11, 4, 11}; {0, 0, 8, 6, 9, 3, 11, 3, 4, 0, 4, 5}; {0, 0, 9, 1, 3, 9, 9, 9, 3, 0, 5, 0}; {0, 0, 10, 0, 7, 11, 7, 4, 11, 11, 2, 5}; {0, 0, 10, 11, 2, 7, 8, 2, 10, 2, 8, 4}; und {0, 0, 11, 6, 5, 0, 8, 1, 0, 4, 10, 1}; und

die Verarbeitungseinheit ferner dazu konfiguriert ist, das erste Signal basierend auf den N Elementen in der Sequenz {$f_n$} zu verarbeiten.

**8.** Signalverarbeitungsvorrichtung nach Anspruch 7, wobei die Sende-/Empfangseinheit ferner zu Folgendem konfiguriert ist:

Erlangen des ersten Signals auf den N Unterträgern auf N aufeinanderfolgenden Unterträgern; oder
Erlangen des ersten Signals auf den N Unterträgern auf N gleichmäßig beabstandeten Unterträgern.

**9.** Signalverarbeitungsverfahren nach einem der Ansprüche 1 bis 4 oder Signalverarbeitungsvorrichtung nach einem der Ansprüche 5 bis 8, wobei das erste Signal ein Referenzsignal ist oder das erste Signal ein Signal ist, das verwendet wird, um Kommunikationsinformationen zu transportieren.

**10.** Signalverarbeitungsverfahren nach einem der Ansprüche 1 bis 4 und 9 oder Signalverarbeitungsvorrichtung nach einem der Ansprüche 5 bis 9, wobei die Menge von Sequenzen $\{S_n\}$, die aus einem Element $S_n$ besteht, mindestens eine erste Sequenz in einer zweiten Sequenzmenge oder eine äquivalente Sequenz der ersten Sequenz und eine zweite Sequenz in der zweiten Sequenzmenge oder eine äquivalente Sequenz der zweiten Sequenz umfasst;

die zweite Sequenzmenge einer der folgenden Mengen ist: eine Sequenzmenge 1, eine Sequenzmenge 2, eine Sequenzmenge 3, eine Sequenzmenge 4, eine Sequenzmenge 5, eine Sequenzmenge 6, eine Sequenzmenge 7, eine Sequenzmenge 8, eine Sequenzmenge 9, eine Sequenzmenge 10, eine Sequenzmenge 11, eine Sequenzmenge 12, eine Sequenzmenge 13 und eine Sequenzmenge 14;
Sequenzen in der Sequenzmenge 1 einige oder sämtliche der folgenden Sequenzen umfassen:
{6, 2, -3, -3, 3, -3, 1, 2, 4, 0, 0, 0}; {1, -4, 2, -3, -1, -2, -3, 0, 5, 6, 0, 0}; {5, -5, 0, 6, 3, -5, 5, -4, 6, 5, 0, 0}; {2, 1, 3, -4, 5, -2, 5, 0, 1, 5, 0, 0}; {-3, 2, 2, 6, -1, -5, 3, 3, 0, 3, 0, 0}; {-1, -3, 6, 0, 3, -1, 2, 3, 3, -4, 0, 0}; {-2, 2, 6, 6, -1, 5, 0, -1, -4, 1, 0, 0}; {-4, 4, 3, -2, 1, 5, -1, 4, -1, 2, 0, 0}; { -1, 2, -4, 2, -4, -4, -1, -2, 4, 2, 0, 0}; {3, -3, 0, 6, 5, 1, 4, 1, -3, -2, 0, 0}; {1, 4, -1, -3, -1, -4, 5, -2, -2, -5, 0, 0}; {-3, 5, -3, 4, -2, -4, 6, 4, -5, -4, 0, 0}; {-4, -5, 2, 1, 6, -3, 3, -3, 1, -1, 0, 0}; {4, -4, -3, 3, -3, 5, -4, -5, -5, 4, 0, 0}; {3, 6, -1, 5, 0, 2, 0, -2, -4, -5, 0, 0}; {5, 2, --2, 3, 1, 1, -4, -2, 5, -3, 0, 0}; {3, 0, -3, 3, -3, -1, -3, 5, -4, -1, 0, 0}; {3, 5, 0, 3, -4, 4, 2, -5, 5, -1, 0, 0}; {4, 2, -4, 4, 1, 5, -4, 4, 6, 0, 0, 0}; {2, -4, -5, 1, 1, -5, 2, 6, 1, 1, 0, 0}; {6, 1, 0, -2, 3, -5, -2, -3, 2, -2, 0, 0}; {-2, 1, 0, 3, -3, -1, 5, -2, -5, 4, 0, 0}; {-3, 1, -4, 3, 6, -2, 3, 5, 1, -1, 0, 0}; {2, -3, 4, -4, -5, 6, --- 1, -- 1, 3, 5, 0, 0}; {1, -4, 1, 0, 2, -2, 2, 5, -5, 4, 0, 0}; {-3, 1, -5, -2, -2, 3, -1, 6, 5, 1, 0, 0}; 5, 1, -4, 2, -4, -1, 1, 0, 3, 4, 0, 0}; {2, -4, 0, -2, 6, 6, 1, -4, -2, 0, 0, 0}; {-3, 6, -2, -5, -4, 2, -2, 1, 4, 6, 0, 0};und {-1, 6, 2, -2, 3, -4, 0, 3, 3, 3, 0, 0};
Sequenzen in der Sequenzmenge 2 einige oder sämtliche der folgenden Sequenzen umfassen:
{6, 2, -3, -3, 3, -3, 1, 2, 4, 0, 0, 0}; {6, 0, -5, 1, 0, 2, 0, 0, 5, 5, 0, 0}; {6, -3, 1, -5, -2, -5, 3, -4, 6, 1, 0, 0}; {-4, 2, 2, -4, 6, -1, 4, -1, 0, 0, 0, 0}; {-3, -5, -1, -5, 4, 3, -3, -1, 5, -2, 0, 0}; {-5, -2, 4, 4, -2, 3, 0, -2, -4, 0, 0, 0}; {-2, -3, 5, -1, -2, 3, -4, 3, -5, 0, 0, 0}; {4, 2, -4, 2, 5, 1, 6, 5, 5, 6, 0, 0}; {-2, -1, 1, -5, 3, 6, 2, 0, -1, 6, 0, 0}; {5, -4, 1, 6, 1, -1, 1, 0, 6, 3, 0, 0}; {-3, 5, 4, 3, -3, 2, 5, -5, 0, -3, 0, 0}; {0, 2, 5, -2, 5, 3, 3, -3, 4, 0, 0, 0}; {4, -1, 4, 4, -1, 0, -4, 5, -2, 0, 0, 0}; {6, 1, -5, 4, 4, -1, 3, -5, -4, 0, 0, 0}; {4, -1, 1, -2, 6, -3, -5, -1, -1, -5, 0, 0}; {3, -3, 2, 4, -3, 5, 3, 4, -1, -2, 0, 01, {-3, 1, -1, 1, 5, 1, -3, 5, 3, 4, 0, 0}; {-5, 6, -3, -5, 3, -1, 2, -2, 3, 6, 0, 0}; {-3, 1, -3, 6, -4, 6, 5, -1, -5, -4, 0, 0}; {6, -2, -2, 2, 3, -2, 3, -3, 3, 2, 0, 0}; {-1, -5, 4, -4, 3, 5, 0, 6, -5, -1, 0, 0}; {-2, -3, 2, 6, 1, -5, -3, 3, 1, -2, 0, 0}; {-3, -5, 0, -2, 2, 4, -3, 2, 5, 2, 0, 0}; {4, -5, -5, -1, 4, -1, 2, 0, -2, 5, 0, 0}; {2, -1, -5, 2, 6, 3, 2, 2, -5, -2, 0, 0}; {3, 0, -5, 0, -5, -2, 1, 0, 3, 4, 0, 0}; {-1, 4, 1, -5, -3, 3, 4, -1, 0, -2, 0, 0}; {-5, 5, -3, 6, -4, 1, -3, 1, 4, 6, 0, 0}; {-5, 4, -2, 2, -3, -1, 3, -3, -1, -2, 0, 0}; {0, 4, 0, -4, 2, -2, -2, 6, -4, 0, 0, 0};
Sequenzen in der Sequenzmenge 3 einige oder sämtliche der folgenden Sequenzen umfassen:
{6, 2, -3, -3, 3, -3, 1, 2, 4, 0, 0, 0}; {4, 5, 6, -2, -3, -1, 4, -1, -2, 4, 0, 0}; {2, -5, 3, -4, 3, 3, 6, -5, 4, 5, 0, 0}; {5, 1, 1, 6, -1, 2, -2, -5, -3, -3, 0, 0,}; {0, 4, 4, 2, 2, -3, -1, 4, -2, -5, 0, 0}; {-5, 4, 0, -5, -5, 5, -5, 2, 5, -2, 0, 0}; {6, -4, 2, -4, -1, 4, 1, -5, -3, 0, 0, 0}; {-3, 5, -4, 2, 2, -2, 2, -1, -4, -3, 0, 0}; {-2, -3, 3, 1, -4, -3, 4, -4, 2, -2, 0, 0}; {3, -1, -3, 1, 2, 5, -3, -5, 1, 4 0, 0}; {-1, 4, -4, -5, 1, 4, 2, -1, -3, 2, 0, 0}; {-3, 3, 5, 0, -4, 1, -2, -4, -3, -4, 0, 0}; {2, -4, 2, 1, 6, 4, -5, -1, 3, 1, 0, 0}; {3, -3, -4, -1, -3, -2, -5, -5, -1, 4, 0, 0}; {-5, 2, 6, -3, 4, 6, -1, 0, -3, 6, 0, 0}; {6, 6, -3, -5,3, -2, 2, -4, 3, 5, 0, 0}; {4, -5, 0, -5, -4, 0, 2, 1, 5, 1, 0, 0}; {3, -2, 2, 5, 5, 5, 6, 1, 6, 4, 0, 0}; {0, 1, 6, -1, 6, 3, 4, -1, -2, 2, 0, 0}; {-3, -5, -2, -4, 4, -4, 1, 6, -4, 6, 0, 0}, {-3, -1, 6, -2, 3, 1, 0, 5, 3, -2, 0, 0}; {3, -5, 3, -1, -5, 6, 2, 5, -2, 0, 0, 0}; {3, 6, 2, 5, -5, 2, -2, 5, 5, 5, 0, 0}; {-4, 5, -2, 0, 6, -4, 5, 2, -3, 0, 0, 0}; {1, -3, 2, 6, 0, -5, -1, -1, 5, 3, 0, 0}; {4, -5, 4, -2, -2, 3, -2, 1, 4, 3, 0, 0}; {-1, -1, -3, 1, -5, 4, 1, -1, 5, -3, 0, 0}; {-3, 4, -3, 1, 5, 2, -1, 0, -2, -4, 0, 0}; {-5, 4, 6, 4, -3, 0, -4, 2, 2, 4, 0, 0}; und {3, -1, 5, -5, 6, -1, 2, 1, 0, 4, 0, 0};
Sequenzen in der Sequenzmenge 4 einige oder sämtliche der folgenden Sequenzen umfassen:
{0, -2, 4, 2, -4, -3, 4, -4, 2, -5, -1}; {-2, -2, -5, 6, 0, 5, -1, 4, -3, -3, 0, 0 1 , 6, 0, -4, -4, 2, 6, -4, -2, 1, 0, 0}; {-2, 2, -2, 1, 5, -2, -2, 6, 4, -1, 0, 0}; {-4, 0, -1, 6, 0, 1, 5, 3, 5, 1,0, 0}; {6, 5, 1, -5, -5, 0, 5, 1, 6, -1, 0, 0}, {3, -4, 3, -4, 5, 5, 2, 2, -4, -3, 0, 0}; {5, -1, 6, 6, 5, 2, -5, 4, 6, -4, 0, 0}; {-4, 1, -5, 4, -4, -5, -4, -2, 5, 4, 0, 0}; {-1, 5, -4, 6, 1, 6, 4, -4, -3, -3, 0, 0}; 1, -5, 2, 1, 5, 0, 1, -3, -5, -4, 0, 0}; {-5, 2, 6, -5, -4, -2, 4, -3, 5, 3, 0, 0); {0, 0, 1, 6, 3, -1, 4, 6, 1, 5, 0, 0}; {-4, -5, 0, -2, -4, -3, 3, 6, 2, -5, 0, 0}; {5, 1, 2, 6, 0, 2, -2, 6, -3, -4, 0, 0}; {3, -3, 2, 4, -3, 5, 3, 4, -1, -2, 0, 0}; {-4, -1, -5, , 1, 0, 5, 0, -3, 5, 4, 0, 0}; {6, -3, -2, 3, -3, 4, -3, -2, 6, 2, 0, 0}; {-2, -3, 2, 6, 1, -5, -3, 3, 1, -2, 0, 0); {-3, 6, 1, -5, 1, 1, 1, 2, 5, -1, 0, 0}; {6, 1, -3, 3, -4, 0, 4, 6, 6, 5, 0, 0}; {-5, 1, -4, -5, -1, 5, -5, -5, -4, 2, 0, 0}; {4, 2, 6, 4, 6, 0, -4, 0, 3, 6, 0, 0}; {-5, -1, 0, 4, -2, 5, 2, 2, -2, 2, 0, 0}; {6, 3, -1, 5, -5, -3, 6, 5, 5, -2, 0, 0}; {1, -1, -5, 2, -4, -3, -2, 4, -4, 0, 0, 0}; {-1, 0, 3, 1, 0, -5, -2, 5, 1, 6, 0, 0}; {-3, 0, 6, 5, 0, 2, -4, 4, -1, -1, 0, 0}; {-4, -1, -4, 1, -3, 2, 3, -3, 4, 3, 0, 0}; und {0, -4, -5, 1, -5, -2, 5, -4, -5, -1, 0, 0,};

Sequenzen in der Sequenzmenge 5 einige oder sämtliche der folgenden Sequenzen umfassen: {0, 0, 8, 7, 6, 0, 6, 4, 9, 5, 7, 10}; {0, 0, 5, 2, 1, 2, 1, 9, 6, 10, 3, 8}; {0, 0, 1, 3, 11, 7, 11, 4, 5, 0, 0, 7}; {0, 0, 10, 5, 5, 10, 3, 9, 10, 10, 2, 9}; {0, 0, 3, 4, 11, 1, 7, 10, 5, 11, 6, 3}; {0, 0, 4, 8, 6, 2, 2, 11, 3, 4, 0, 5}; {0, 0, 2, 10, 4, 0, 11, 9, 6, 0, 3, 5}; {0, 0, 9, 2, 3, 1, 9, 1, 10, 5, 6, 9}; {0, 0, 7, 11, 5, 3, 6, 3, 0, 0, 4, 3}; {0, 0, 8, 8, 0, 10, 8, 2, 7, 2, 9, 0}; {0, 0, 4, 10, 2, 4, 7, 6, 10, 7, 5, 3}, {0, 0, 5, 2, 1, 5, 2, 5, 0, 10, 0, 7}; {0, 0, 3, 3, 7, 1, 5, 3, 1, 11, 7, 11}; {0, 0, 9, 5, 11, 11, 0, 4, 8, 3, 6, 7}; {0, 0, 2, 11, 10, 4, 6, 9, -3, 8, 2, 9}; {0, 0, 9, 0, 5, 10, 10, 10, -3, 11, 5, 3}; {0, 0, 9, 8, 2, 5, 0, 6, 7, 11, 9, 2}; {0, 0, 1, 10, 1, 8, 11, 3, 2, 8, 7, 2}; {0, 0, 1, 6, 11, 3, 10, 7, 4, 11, 2, 1}; {0, 0, 11, 7, 8, 4, 11, 10, 2, 2, 9, 2}; {0, 0, 4, 8, 10, 3, 11, 4, 2, 2, 11, 6}; {0, 0, 6, 7, 5, 5, 0, 4, 6, 3, 10, 4}; {0, 0, 2, 7, 6, 4, 11, 8, 5, 9, 4, 7}; {0, 0, 7, 11, 10, 11, 4, 3, 7, 0, 8, 8}; {0, 0, 1, 5, 9, 2, 10, 3, 0, 8, 4, 4}; {0, 0, 1, 10, 8, 5, 0, 4, 9, 10, 2}; {0, 0, 9, 5, 10, 0, 5, 1, 6, 6, 8, 4}; {0, 0, 11, 4, 1, 7, 8, 1, 3, 9, 0, 9}; {0, 0, 1, 9, 0, 1, 6, 1, 8, 8, 5, 0}; und {0, 0, 8, 10, 0, 7, 2, 0, 4, 8, 6, 9};

Sequenzen in der Sequenzmenge 6 einige oder sämtliche der folgenden Sequenzen umfassen: {0, 0, 8, 4, 6, 1, 9, 1, 1, 8, 0, 0}; {0, 0, 1, 9, 2, 5, 4, 8, 5, 1, 0, 6}; {0,0, 10, 1, 8, 1, 4, 5, 10, 10, 4, 1}; {0, 0, 3, 6, 5, 2, 7, 4, 3, 1, 7, 0}; {0, 0, 2, 11, 11, 5, 6, 2, 5, 10, 6, 1}, {0, 0, 3, 3, 11, 8, 5, 7, 3, 6, 11, 4}; {0, 0, 8, 11, 9, 4, 11, 2, 6, 5, 5, 10}; {0, 0, 11, 6, 1, 0, 4, 7, 10, 5, 8, 4}; {0, 0, 6, 10, 2, 1, 4, 0, 8, 8, 11, 8}; {0, 0, 10, 11, 0, 2, 6, 10, 8, 3, 10,3}; {0, 0, 9, 3, 10, 3, 4, 1, 4, 9, 10, 1}; {0, 0, 7, 5, 0, 9, 2, 9, 3, 6, 4, 5}; {0, 0, 0, 4, 8, 11, 9, 6, 10, 5, 0, 11}; {0, 0, 11, 9, 4, 9, 3, 9, 3, 4, 8, 8}; {0, 0, 8, 3, 3, 2, 4, 10, 2, 0, 8, 0}; {0, 0, 3, 8, 2, 2, 9, 7, 6, 2, 6, 3}; {0, 0, 4, 11, 11, 0, 11, 9, 3, 5, 2, 8}; {0, 0, 6, 5, 8, 6, 6, 8, 1, 6, 11, 7}; {0, 0, 6, 9, 6, 10, 5, 9, 8, 1, 11, 9}; {0,0, 11, 1, 3, 9, 8, 5, 1, 6, 0, 8}; {0, 0, 7, 8, 2, 1, 9, 4, 9, 7, 8, 10}; {0, 0, 2, 0, 8, 9, 6, 10, 3, 9, 9, 2}; {0, 0, 4, 0, 6, 1, 9, 7, 6, 2, 5, 8}; {0, 0, 10, 7, 3, 8, 3, 7, 6, 8, 11, 4}; {0, 0, 10, 2, 3, 8, 9, 10, 6, 1, 7, 0}; {0, 0, 7, 6, 9, 3, 3, 1, 3, 5, 1, 5}; {0, 0, 4, 1, 8, 3, 5, 3, 2, 9, 11, 4}; {0, 0, 6, 9, 11, 3, 11, 3, 0, 1, 9, 4}, {0, 0, 3, 8, 10, 7, 4, 3, 8, 4, 8, 6}; und {0, 0, 8, 8, 2, 8, 3, 10, 2, 0, 2, 4};

Sequenzen in der Sequenzmenge 7 einige oder sämtliche der folgenden Sequenzen umfassen: {0, 4, -4, -2, 4, 3, 0, -4, -2, -4, -1, -3}; {-4, -1, 0, 5, -1, 6, -2, -2, -5, 3, 0, 0}; {-5, 5, -1, 1, -2, 3, -4, 1, 1, -3, 0, 0}; {-4, 2, -5, 3, 4, 6, 0, 0, -3, -5, 0, 0}; {-1, 5, 0, -5, 3, 2, 2, -5, -2, 1, 0, 0}; {-5, 0, -5, 1, 3, 4, -4, 2, 1, 0, 0, 0}; {1, -3, 0, -4 ,1, -2, -4, 4, -5, 3 0, 0}; {-1, -3, 6, 0, 3, -1, 2, 3, 3, -4, 0, 0}; {1, 3, -3, 4, 6, -3, 2, 0, 5, 1, 0, 0}; {-2, 2, 6, 6, -1, 5, 0, -1, -4, 1, 0, 0}; {2, -4, 3, -5, -5, 5, -2, 0, 4, 4, 0, 0}; {3, 3, 0, 1, -5, 0, 6, 2, -4, -4, 0, 0}; {5, 3, -1, 4, 4, -1, 4, -5, 5, -2, 0, 0}; {3, 3, -5, -5, 1, -3, 3, -4, 2, 3, 0, 0}; {-2, 4, 5, 1, -2, 4, 4, -4, 1, -1, 0, 0}; {5, 1, 0, 5, -2, 2, -3, 6, -2, 0, 0, 0}; {-5, -1, 6, 0, 6, 6, -4, -4, 6, 5, 0, 0}; {3, 2, 4, -3, 6, -1, 5, 0, 1, 5, 0, 0}; {-5, 1, -5, 6, -1, 5, -5, 6, -5, 1, 0, 0}; {2, -1, 4, -1, 6, 5, 1, 2, -4, -1, 0, 0}; {3, -3, 0, 6, 5, 1, 5, 2, -3, a...:7 0, 0}; {2, -4, -5, -1, 2, -4, -4, 4, -1, 1, 0, 0}; {-1, 3, -5, 1, -4, -3, -3, 4, 1, -2, 0, 0}; {-4, 1, 0, 5, 1, 4, -2, 4, 4, 1, 0, 0}; {-5, -2, 4, -5, -1, -5, 4, -4, 6, 0, 0, 0}; {-2, 4, -4, 3, -4, -5, -1, -1, 1, 3, 0, 0}; {1, -3, 1, -4, 0, -3, -3, 0, 6, 6, 0, 0}; {2, -2, 5, 1, 2, -3, 1, 6, -4, -1, 0, 0}; {1, -5, 1, -3, -5, -1, -1, 6, -5, 1, 0, 0};und {4, 6, -4, -4, -3, 6, 0, 6, 6, 3, 0, 0};

Sequenzen in der Sequenzmenge 8 einige oder sämtliche der folgenden Sequenzen umfassen: {0, -3, -5, 2, -3, 1, -2, 1, -1, 2, 6, -4}; {-5, 3, 5, 0, 5, 1, -1, 6, -4, -2, 0, 0}; {0, -2, 6, 0, - 1, 3, -4, 3, -5, 0, 0, 0}; {-3, 0, 5, 0, -5, -3, -5, 3, 0, -2, 0, 0}; {-2, 4, 4, 1, -2, 3, 4, -4, 1, -2, 0, 0}; {-3, 0, 5, 2, -5, 3, -1, -2, 2, 2, 0, 0}; {5, -3, -1, 1, -2, 5, 2, 3, 0, 4, 0, 0}; {1, 6, 0, -5, 4, -2, 0, 3, 3, 3, 0, 0}; {5, 0, 0, 5, -4, 3, 5, 1, -3, 0, 0, 0}; {0, 5, -4, -4, 1, 6, 1, -2, -3, 2, 0, 0}; {-3, -3, 5, -2, -1, -5, 1, 5, 3, -3, 0, 0}; {1, 6, 2, -4, -2, 0, -2, -1, 4, 3, 0, 0}; {-1, -4, 0, -4, -1, -1, 3, -5, -4, 4, 0, 0}; {3, 1, -4, -2, -4, 1, 6, -1, 0, -4, 0, 0}; {6, 0, 5, -3, 5, 5, 5, 3, -3, -4, 0, 0}; {-4, -1, 2, -4, 6, -2, -4, -5, -4, 3, 0, 0}; {6, 6, -2, -3, 4, -2, 5, -3, 3, 3, 0, 0}; {-3, 1, 1, 6, 3, -1, 4, 6, 3, 2, 0, 0}; {-5, 4, -1, 6, -3, 6, 5, 3, -5, -2, 0, 0}; {-4, 2, 6, 3, 4, 6, -1, 0, -3, 6, 0, 0}; {4, -2, 6, -3, -4, 6, 1, 0, 3, 6, 0, 0}; {-2, -5, 5, -4, 4, 6, 1, 6, -4, -4, 0, 0}; {4, -5, 4, -3, 2, 4, -2, -4, 4, 0, 0, 0}; {-4, -5, 0, -2, -4, -3, 3, 6, 2, -5, 0, 0}; {4, 4, -1, 3, -2, 1, 3, 2, 4, 5, 0, 0}; {6, -1, 0, 6, 5, -4, 2, -3, 1, 0, 0, 0}; {-4, 2, -5, 2, -3, 6, 5, -2, 0, 2, 0, 0}; {0, 3, 1, 5, -2, 3, 4, -3, 5, 2, 0, 0}; {-5, 4, 5, -1, 6, -5, 1, 5, 5, -2, 0, 0};und {0, -1, 3, 5, 4, -1, 4, 5, 0, 4, 0, 0};

Sequenzen in der Sequenzmenge 9 einige oder sämtliche der folgenden Sequenzen umfassen: {0, 4, 0, -2, 1, -2, -4, 1, 2, 0, 5, -5}; {1, 4, -1, 4, -3, -3, 0, -2, 6, 2, 0, 0}; {0, -5, -1, 4, 4, 0, 3, 1, -3, -3, 0, 0}; {1, 6, -3, -4, 2, 6, 2, -1, -2, 2, 0, 0}; {5, 3, 1, 5, 1, 3, -2, 5, 6, -3, 0, 0}; {2, -2, 3, -2, 4, 5, 2, 2, 5, 5, 0, 0}; {4, -5, 0, 4, 2, 6, 3, -4, 6, 4, 0, 0}; {3, -2, 5, -2, 0, -2, -3, 3, 3, -2, 0, 0}; {-1, 6, 3, 1, 6, -1, -2, 0, -5, -1, 0, 0}; {-1, 2, -4, 2, -4, 6, 1, 2, -2, -2, 0, 0}; {-5, 3, 2, 5, 3, 0, 4, -3, 5, -4, 0, 0}; {1, 0, -3, -4, 1, 5, -2, 5, -2, -3, 0, 0}; {-4, 0, 0, 6, 0, -5, -2, -4, -4, 5, 0, 0}; {6, 4, -3, 2, -2, 5, 5, -2, 0, 3, 0, 0}; {-4, 6, -2, -3, 1, -5, 0, 3, 6, 3, 0, 0}; {-4, 2, 1, -4, -2, 3, -3, 6, -2, 0, 0, 0}; {4, -2, 6, -3, -4, 6, 1, 0, 3, 6, 0, 0}; {6, -3, 6, -3, 3, 6, -5, -1, -5, 4, 0, 0}; {-5, 6, -3, -5, 3, -1, 2, -2, 3, 6, 0, 0}; {4, 0, 6, -5, 4, -5, -1, 4, 3, -2, 0, 0}; {-5, 2, 6, -5, -4, -2, 4, -3, 5, 3, 0, 0}; {-3, 1, 5, 0, -5, -3, -4, 3, 0, -2, 0, 0}; {0, 5, -5, -2, -1, 3, -4, 3, -3, 3, 0, 0}; {6, 3, 4, 0, 6, 4, -2, 4, 6, -2, 0, 0}; {-5, -4, 6, 3, 6, -1, 5, 5, -2, -5, 0, 0}; {-3, 2, -5, 0, -1, -3, -5, 5, -3, -4, 0, 0}; {4, 2, -5, 0, -3, 6, 0, 2, -4, 0, 0, 0}; {-1, 6, 5, 4, -2, 1, -2, 0, 1, -4, 0, 0}; {-4, 0, 5, 2, -3, -4, 4, -2, 1, 1, 0, 0};und {-5, 6, 1, 0, 2, -1, 4, -1, 2, -5, 0, 0};

Sequenzen in der Sequenzmenge 10 einige oder sämtliche der folgenden Sequenzen umfassen: {6, 0, 6, 0, 4, -5, -4, 2, 0, -2, 0, 0}; {2, -4, 3, -5, -5, 5, -1, 0, 3, 4, 0, 0}; {-4, 0, 4, 3, -2, 3, -1, -2, -5, 0, 0}; {0, 4, -2, 4, -3, -4, -1, -2, 6, 5, 0, 0}; {3, 0, 4, -2, 0, 6, 0, -3, -5, -3, 0, 0}; {-1, 0, 3, 4, -1, -5, 2, -5, 2, 3, 0 0}; {-1, -1, 1, -4, 6, -3, 3, -2, -1, 5, 0, 0}; {-1, 6, -4, 2, -5, 3, 0, -4, -3, -2, 0, 0}; {6, 3, -1, 5, -1, 0, -1, 6, -3, 0, 0, 0}; {3, -2, 3, 2, -3, 2, 4, 5, -5, 1, 0, 0}; {-5, 0, 0, -5, 4, -3, -5, -1, 3, 0, 0, 0}; {3, -3, 5, 2, 2, -3, 1, -5, -3, -1, 0, 0}; {-2, -3, 2, -1, 3, 4, -3, 2, 5, 2, 0, 0}; {-2, 3, -4, 4, 5, 6, 1, 1, -3, -5, 0, 0}; {2, 1, -4, 2, 3, -3, 3, 6, 4, -2, 0, 0}; {-4, 0, 2, -3, 3, 0, 4, 6, 3, 1, 0, 0}; {0, 3, 1, 5, -2, 3, 4, -3, 5, 2, 0, 0}; {1, -2, -5, 0, 5, 0, 3, 2, 4, 6, 0, 0}; {-5, 3, -2, 1, -4, -1, 3, 3, -1, -2, 0, 0}; {-4, 3, -5, -1, -5, -4, 6, 4, -5, -5, 0, 0}; {-4, -1, 2, -4, 6, -2, -4, -5, -4, 3, 0, 0}; {2, -4, -4, -1, 2, -3, -4, 4, -1, 2, 0, 0}; {-1, -1, 4, -5, -4, 3, -2, 1, -3, 2, 0, 0}; {4, 0, -4, 2, 1, 4, -4, 3, 5, 0, 0, 0}; {4, -5, 4, -3, 2, 4, -2, -4, 4, 0, 0, 0}; {-2, -5, 0, -4, 6, 5, -4, -1, 5, -3, 0, 0}; {0, -4, -3, 4, -2, -5, 1, 6, -5, -1, 0, 0}; {-5, -1, -5, -2, 4, -1, -4, 4, 5, 6, 0, 0}; {-4, 3, -1, 0, 6, 6, -1, 3, -1, -1, 0, 0};und {-1, 1, 2, -2, 2, -1, 3, -3, 6, 5, 0, 0};

Sequenzen in der Sequenzmenge 11 einige oder sämtliche der folgenden Sequenzen umfassen: 6, 0, 6, 0, 4, -5, -4, 2, 0, -2, 0, 0}; {-2, 1, -4, -4, 4, -4, 3, -1, -4, -2, 0, 0}; {5, 2, 4, -1, 5, 6, 1, 5, 5, -3, 0, 0}; {3, 3, 0, 5, -5, 4, -3, 2, 1, 6, 0, 0}; {-5, 1, 6, 0, -4, 5, 5, -3, 0, 1, 0, 0}; {-1, 4, 2, -3, -4, 0, 6, -2, 2, 0, 0, 0}; {-4, 6, 1, 2, -4, 4, -3, -1, 2, -1, 0, 0}; {3, 6, -1, -2, 3, -5, 3, 1, -2, 2, 0, 0}; {0, 0, 1, 6, 3, -1, 4, 6, 1, 5, 0, 0}; {5, -1, 5, -2, 0, 0, -1, 0, -4, 6, 0, 0}; {-4, 1, 6, 1, -2, 6, 0, 2, 4, 3, 0, 0}; {-5, -5, -5, 2, 6, -2, 6, 4, -3, 6, 0, 0}; {1, -3, 1, 6, 6, -3, 1, 0, -2, 3, 0, 0}; {0, -3, -1, -5, 2, -3, -4, 3, -5, -2, 0, 0}; {-5, 2, -4, -2, 1, 3, -3, 5, 1, 1, 0, 0} ; {0, 3, 1 , 5, -2, 3, 4, -3, 5, 2, 0, 0}; {-1, 6, -2, 1, -3, -2, -5, 4, -5, -5, 0, 0}; {2, -2, -3, -5, 0, 5, -4, -4, 1, -3, 0, 0}; {1, -4, 2, 6, -4, 3, 1, 0, -2, -3, 0, 0}; {2, 4, -5, 1, 5, 0, -5, 5, 3, 1, 0, 0}; {-3, -1, 6, -3, 1, 0, 4, 2, -5, 3, 0, 0}; (3, 5, -4, -3, 3, -2, -5, 5, 0, 3, 0, 0}; {5, 4, 0, -5, 3, -4, 2, 5, -4, 0, 0, 0}; {-1, 0, 6, -3, 6, -2, 6, -1, -4, 6, 0, 0}; {3, -3, -1, 5, 5, 1, 5, 1, -3, -1, 0, 0}; {4, 1, 6, 5, -3, 5, -2, 2, 5, 2, 0, 0}; {0, 0, -5, -1, 6, -4, 1, -3, 6, -1, 0, 0}; {-2, -4, 6, 0, 5, -3, -5, 3, -4, -1, 0, 0}; {2, 2, 3, -1, 6, 5, 1, 2, -4, -1, 0, 0}; und {-3, 1, -3, 6, -4, 6, 5, -1, -5, -4, 0, 0};

Sequenzen in der Sequenzmenge 12 einige oder sämtliche der folgenden Sequenzen umfassen: {0, 0, 11, 6, 7, 7, 10, 4, 9, 9, 3, 10}; {0, 0, 7, 4, 9, 6, 3, 3, 4, 9, 3, 6 }; {0, 0, 2, 5, 1, 2, 10, 10, 6, 1, 7, 4}; {0, 0, 1, 3, 3, 9, 6, 2, 4, 11, 2, 9}; {0, 0, 10, 0, 7, 11, 7, 4, 11, 11, 2, 5}; {0, 0, 7, 8, 10, 9, 11, 2, 9, 1, 8, 4}, {0, 0, 11, 8, 9, 3, 9, 0, 9, 2, 1, 6}; {0, 0, 11, 4, 1, 0, 7, 1, 6, 6, 10, 2}; {0, 0, 4, 8, 8, 3, 9, 0, 7, 1, 10, 10}; {0, 0, 10, 11, 2, 7, 8, 2, 10, 2, 8, 4) ; {0, 0, 3, 1, 11, 6, 7, 1, 4, 11, 7, 11}; {0, 0, 6, 6, 1, 3, 4, 4, 5, 0, 6, 0}; {0, 0, 8, 4, 4, 9, 3, 0, 5, 11, 2, 2}; {0, 0, 5, 4, 2, 0, 2, 0, 7, 1, 6, 9}; {0, 0, 1, 4, 7, 3, 1, 3, 9, 3, 0, 9}; {0, 0, 8, 6, 9, 3, 11, 3, 4, 0, 4, 5}; {0, 0, 0, 0, 3, 6, 0, 10, 6, 3, 8, 1}; {0, 0, 3, 1, 10, 11, 8, 2, 6, 1, 2, 7}; {0, 0, 3, 7, 1, 4, 7, 6, 4, 0, 5, 2}; {0, 0, 8, 5, 7, 10, 2, 10, 0, 11, 4, 11}; {0, 0, 3, 6, 10, 8, 8, 3, 11, 9, 0, 8}; {0, 0, 3, 0, 9, 4, 3, 3, 9, 1, 8, 0}; {0, 0, 2, 5, 3, 1, 5, 0, 0, 9, 3, 8}; {0, 0, 6, 5, 3, 5, 1, 5, 1, 8, 1, 2} ; {0, 0, 11, 6, 5, 0, 8, 1, 0, 4, 10, 1}; {0, 0, 7, 7, 11, 8, 7, 11, 7, 0, 9, 0}; {0, 0, 11, 9, 4, 4, 6, 9, 5, 11, 4, 7}; {0, 0, 9, 1, 3, 9, 9, 9, 3, 0, 5, 0}, {0, 0, 6, 8, 1, 3, 1, 4, 9, 5, 11, 8}; und {0, 0, 7, 8, 8, 6, 2, 9, 6, 10, 3, 9};

Sequenzen in der Sequenzmenge 13 einige oder sämtliche der folgenden Sequenzen umfassen: {0, 0, 0, 5, 3, 2, 11, 4, 10, 10, 3, 8}; {0, 0, 8, 7, 6, 8, 11, 2, 8, 3, 11, 4}; {0, 0, 11, 8, 5, 9, 11, 9, 3, 9, 0, 3}; {0, 0, 3, 5, 8, 4, 2, 11, 4, 0, 3, 11}; {0, 0, 4, 7, 7, 1, 7, 10, 5, 10, 8, 7}; {0, 0, 4, 0, 1, 6, 11, 4, 2, 4, 11, 9}, {0, 0, 0, 3, 6, 1, 0, 1, 7, 1, 9, 6}; {0, 0, 2, 3, 10, 7, 11, 7, 6, 0, 3, 9}; {0, 0, 9, 10, 4, 9, 3, 11, 5, 5, 9, 9}; {0, 0, 0, 3, 9, 10, 8, 2, 6, 2, 11, 6}; {0, 0, 4, 1, 11, 7, 8, 1, 5, 0, 8, 11};

{0, 0, 1, 0, 4, 0, 8, 8, 3, 3, 8, 0}; {0, 0, 7, 6, 7, 7, 4, 10, 8, 1, 6, 11}; {0, 0, 2, 7, 1, 3, 10, 10, 6, 2, 7, 5}; {0, 0, 11, 7, 0, 10, 3, 6, 8, 3, 9, 11}; {0, 0, 7, 8, 11, 10, 11, 2, 8, 2, 8, 4}; {0, 0, 1, 0, 7, 11, 11, 7, 4, 0, 3, 8}; {0, 0, 11, 5, 6, 1, 1, 5, 3, 11, 5, 11}; {0, 0, 11, 3, 0, 4, 0, 8, 8, 1, 4, 8}; {0, 0, 0, 7, 8, 0, 7, 0, 0, 7, 1}; {0, 0, 7, 7, 4, 6, 7, 6, 11, 7, 2, 7}; {0, 0, 1, 0, 5, 10, 4, 8, 7, 2, 1, 8}; {0, 0, 11, 8, 6, 1, 9, 2, 1, 5, 10, 2}; {0, 0, 5, 5, 1, 3, 8, 0, 7, 2, 7, 5}; {0, 0, 0, 10, 6, 8, 2, 1, 6, 6, 1, 7}; {0, 0, 2, 6, 4, 5, 1, 3, 9, 3, 1, 8}; {0, 0, 10, 8, 6, 1, 6, 9, 4, 9, 8, 0}; {0, 0, 2, 5, 9, 7, 6, 3, 6, 1, 8, 5}; {0, 0, 0, 11, 8, 0, 5, 0, 2, 7, 6, 0};und {0, 0, 4, 3, 11, 9, 8, 10, 7, 2, 7, 0}; und

Sequenzen in der Sequenzmenge 14 einige oder sämtliche Sequenzen in einer Vereinigungsmenge der Sequenzen in der ersten Sequenzmenge und der folgenden Sequenzen umfassen:

{0, 0, 8, 7, 6, 0, 6, 4, 9, 5, 7, 10}, {0, 5, 6, 7, 7, 0, 11, 1, 4, 2, 0, 0}; {0, 7, 2, 0, 9, 10, 7, 10, 1, 2, 5, 10}; {0, 2, 0, 1, 0, 4, 7, 9, 3, 2, 11, 6}; {0, 10, 8, 5, 6, 0, 4, 6, 5, 9, 6, 11}; {0, 4, 4, 4, 10, 9, 9, 5, 9, 8, 4, 8}; {0, 9, 8, 1, 11, 11, 1, 6, 10, 7, 1, 5}; {0, 1, 3, 2, 11, 11, 5, 6, 0, 6, 0, 9}; {0, 7, 3, 1, 7, 8, 10, 3, 0, 2, 11, 1}; {0, 11, 1, 2, 3, 10, 8, 3, 8, 2, 4, 0}; {0, 10, 1, 10, 3, 10, 8, 7, 1, 3, 8, 11}; {0, 3, 10, 7, 5, 1, 5, 10, 1, 1, 3, 1}; {0, 3, 9, 11, 9, 7, 5, 10, 8, 0, 10, 1}; {0, 1, 3, 5, 2, 1, 2, 9, 2, 9, 9, 4}; {0, 7, 2, 2, 7, 2, 5, 5, 8, 2, 2, 1}; {0, 9, 0, 7, 9, 8, 0, 3, 4, 0, 6, 5}; {0, 7, 2, 6, 4, 1, 9, 10, 5, 7, 8, 9}; {0, 5, 11, 10, 1, 8, 7, 6, 0, 11, 10, 2}; {0, 11, 1, 3, 2, 1, 8, 10, 3, 8, 5, 0}; {0, 5, 11, 3, 2, 8, 3, 4, 6, 5, 1, 0}; {0, 6, 8, 0, 8, 7, 0, 10, 0, 7, 5, 7}; {0, 3, 1, 6, 4, 8, 5, 3, 2, 8, 0, 3}; 0, 1, 0, 9, 6, 1, 3, 9, 3, 9, 9, 0}; {0, 3, 0, 2, 7, 11, 11, 2, 10, 6, 3, 3}; {0, 5, 8, 8, 9, 7, 9, 4, 1, 10, 6, 10}; {0, 6, 7, 6, 0, 1, 10, 1, 1, 9, 1, 11}; {0, 10, 6, 6, 2, 4, 5, 11, 4, 1, 4, 5}; {0, 6, 4, 2, 9, 10, 9, 11, 7, 9, 10, 3}; {0, 9, 2, 2, 1, 9, 10, 0, 4, 5, 0, 5}; {0, 3, 11, 8, 3, 4, 9, 11, 0, 11, 1, 8}; {0, 5, 10, 3, 7, 4, 2, 3, 11, 9, 2, 1}, {0, 11, 8, 0, 9, 7, 11, 1, 0, 5, 8, 3}; {0, 4, 9, 2, 1, 5, 4, 8, 6, 4, 2, 1}; {0, 1, 10, 9, 11, 11, 4, 2, 9, 4, 7, 1}; {0, 1, 0, 11, 1, 6, 6, 0, 0, 7, 2, 8}; {0, 6, 1, 9, 3, 4, 10, 11, 6, 6, 5, 7}; {0, 3, 11, 2, 7, 9, 9, 11, 8, 4, 0, 10}; {0, 8, 4, 10, 7, 11, 1, 0, 5, 7, 3, 4}; {0, 1, 5, 6, 5, 5, 2, 5, 11, 5, 2, 9}; {0, 9,6, 7, 2, 10, 3, 5, 8, 5, 6, 8}; {0, 11, 0, 11, 9, 1, 5, 5, 10, 0, 7, 2}; {0, 0, 0, 7, 8, 9, 1, 7, 0, 0, 8, 2}; {0, 0, 9, 10, 0, 5, 4, 11, 7, 11, 4, 11 }; {0, 1, 5,2, 7, 6, 0, 6, 8, 6, 3, 4}; {0, 7, 4, 9, 2, 3, 10, 8, 9, 11, 10, 10}; {0, 8, 10, 5, 10, 6, 4, 11, 1, 3, 5,5}; {0, 0, 10, 4, 4, 2, 4, 9, 1, 0, 5, 11}; {0, 7, 11, 2, 11, 10, 10, 4, 3, 6, 5, 11}; {0, 10, 11, 1, 9, 3, 8, 7, 1, 3, 9, 8}; {0, 8, 3, 5, 10, 10, 1, 5, 2, 2, 4, 1}; {0, 4, 0, 10, 1, 10, 8, 1, 2, 0, 5, 7}; {0, 7, 4, 2, 11, 1, 6, 9, 9, 0, 9, 0}; {0, 1, 9, 11, 3, 2, 4, 8, 4, 11, 7, 2}; {0, 10, 10, 7, 3, 8, 6, 9, 11, 5, 10, 0}; {0, 6, 3, 9, 9, 11, 11, 9, 9, 3, 6, 0}; {0, 10, 8, 7, 0, 11, 7, 10, 0, 5, 1, 5}; {0, 7, 2, 6, 6, 1, 9, 11, 2, 1, 10, 11}; {0, 10, 4, 2, 8, 9, 8, 8, 2, 7, 11}; {0, 0, 8, 7, 8, 11, 4, 10, 2, 0, 6, 2}; {0, 10, 6, 6, 11, 2, 7, 2, 7, 5, 7, 7}; {0, 5, 3, 8, 5, 8, 0, 5, 7, 5, 3, 2}; {0, 10, 9, 8, 1, 11, 4, 1, 6, 9, 1, 6}; {0, 0, 0, 11, 3, 8, 2, 7, 5, 0, 11, 5}; {0, 1, 1, 4, 2, 8, 3, 0, 1, 8, 10, 4}; {0, 9, 7, 2, 9, 1, 10, 11, 11, 2, 6, 8}; {0, 10, 7, 10, 6, 3, 9, 1, 4, 2, 5, 7}; {0, 6, 11, 6, 1, 0, 5, 6, 9, 9, 7, 7}; {0, 3, 1, 3, 4, 6, 0, 3, 0, 9, 7, 2}; {0, 4, 2,6, 6, 0, 4, 7, 3, 2, 1, 10}; {0, 11, 6, 2, 1, 11, 1, 8, 1, 6, 6, 9}; {0, 1, 0, 11, 5, 5, 11, 0, 5, 0, 7, 0}; {0, 4, 7, 9, 1, 9, 1, 10, 2, 0, 10, 7}; {0, 2, 6, 8, 9, 4, 11, 2, 10, 3, 1, 11}; {0, 0, 11, 6, 7, 7, 10, 4, 9, 9, 3, 10}; {0, 8, 4, 0, 4, 11, 1, 9, 10, 10, 0, 3}; {0, 4, 10, 4, 8, 8, 1, 0, 5, 3, 1,1}; {0, 0, 8, 1, 2, 10, 4, 8, 6, 0, 3, 3}; {0, 3, 6, 3, 6, 10, 7, 3, 7, 5, 2, 3}; {0, 5, 7, 11, 7, 2, 3, 2, 7, 4, 5, 4}; {0, 0, 4, 7, 11, 7, 6, 3, 9, 6, 9, 6}; {0, 3, 6, 9, 3, 2, 11, 6, 9, 7, 9, 7}; {0, 8, 4, 5, 0, 7, 0, 1, 4, 0, 2, 3}; {0, 10, 3, 0, 4, 5, 10, 3, 5, 2, 11, 0}; {0, 0, 4, 3, 9, 5, 3, 4, 0, 3, 9, 1}; {0, 6, 1, 3, 3, 8, 3, 4, 6, 4, 0, 0}; {0, 3, 11, 2, 6, 7, 6, 4, 3, 9, 6, 2}; {0, 1, 2, 10, 9, 3, 1, 11, 3, 8, 3, 8}; {0, 3, 2, 2, 9, 7, 6, 1, 5, 5, 10, 4}; {0, 4, 5, 7, 2, 9, 6, 6, 1, 5, 2, 2}; {0, 6, 0, 1, 8, 3, 1, 1, 1, 7, 8, 9}; {0, 10, 8, 8, 7, 0, 10, 3, 0, 4, 8, 1}; {0, 4, 8, 10, 4, 3, 0, 8, 10, 8, 11, 9}; {0, 10, 10, 8, 6, 9, 0, 11, 3, 4, 10, 4}; {0, 10, 6, 2, 6, 3, 5, 2, 6, 9, 1, 3}; {0, 9, 7, 55, 10, 7, 11, 8, 11, 1, 5, 9}; {0, 8, 4, 7, 1, 2, 7, 0, 11, 11, 1, 1}; {0, 11, 10, 4, 5, 5, 7, 1, 6, 5, 11, 5}; {0, 8, 7, 6, 1, 10, 2, 1, 3, 5, 11, 3}; {0, 8, 3, 6, 4, 0, 11, 1, 2, 10, 1, 4}; {0, 9, 1, 10, 4, 1, 1, 10, 1, 4, 8, 9}; {0, 7, 0, 5, 10, 10, 4, 3, 10, 10, 11, 10}; {0, 11, 3, 3, 6, 3, 2, 1, 9, 2, 6, 11}; {0, 11, 10, 8, 9, 0, 0, 5, 4, 10, 4, 9}; {0, 1, 11, 1, 3, 9, 9, 4, 2, 6, 0, 8}; {0, 8, 2, 10, 7, 10, 1, 8, 10, 3, 3, 3}; {0, 7, 2, 10, 2, 2, 3, 6, 1, 2, 10, 10}; {0, 1, 10, 10, 1, 3, 0, 7, 7, 0, 7, 2}; {0, 1, 8, 9, 6, 9, 10, 10, 3, 11, 7, 1}; {0, 8, 4, 5, 11, 6, 11, 0, 2, 10, 11, 0}; {0, 5, 5, 6, 10, 1, 8, 8, 6, 5, 9, 5}; {0, 8, 9, 5, 4, 10, 5, 2, 5, 5, 6, 9}; {0, 7, 5, 2, 11, 2, 7, 10, 11, 1, 11, 2}; {0, 3, 6, 11, 8, 6, 5, 8, 5, 10, 7}; {0, 2, 4, 0, 4, 2, 7, 1, 11, 10, 6, 5}; {0, 10, 8, 5, 5, 10, 2, 4, 2, 6, 3, 7}; {0, 8, 7, 3, 1, 3, 0, 3, 2, 7, 0}; {0, 9, 6, 5, 9, 6, 1, 3, 4, 8, 3, 6}; {0, 10, 10, 5, 1, 6, 4, 3, 7, 3, 5}; {0, 11, 10, 7, 11, 10, 11, 5, 0, 4, 5, 10}; und {0, 3, 4, 9, 6, 9, 10, 5, 11, 9, 9, 6}.

11. Computerlesbares Speichermedium, das dazu konfiguriert ist, eine Computeranweisung zu speichern, wobei die Computeranweisung dazu verwendet wird, das Signalverarbeitungsverfahren nach den Ansprüchen 1 bis 4 und Ansprüchen 9 bis 10 durchzuführen.

## Revendications

1. Procédé de traitement de signal basé sur une séquence, dans lequel le procédé de traitement de signal comprend :

la détermination (S101) d'une séquence $\{f_n\}$ comprenant N éléments, dans lequel $f_n$ est un élément dans la séquence $\{f_n\}$, la séquence $\{f_n\}$ est une séquence respectant une condition prédéfinie, la condition prédéfinie est $f_n = A \cdot X_n \cdot e^{2\pi j \cdot a \cdot n}$, une valeur de n est comprise dans une plage allant de 0 à N-1, A est un nombre complexe non nul, $\alpha$ est un nombre réel,

$$j = \sqrt{-1}$$

, pour un élément $X_n$, $X_n = u \cdot e^{2\pi j \cdot sn/M}$, M=12, u est un nombre complexe non nul, et un ensemble de séquences $\{S_n\}$ constitué d'un élément $S_n$ comprend au moins une des séquences dans un premier ensemble de séquences, dans lequel

les séquences dans le premier ensemble de séquences comprennent tout ou partie des séquences suivantes :

{-2, 4, -2, 4, 0, 2, 2, 0, 5, 5, 0, 0}; {-1, 6 , 1 -4, -5, -5, 6, -5, 0, -3 3 -3 0, -2, -2, 0, 5, -5, 0, 0}, {2, -4, 2, -4, -1, -2, -2, -1, -5, 6, 0, 0}; {-4, 2, -4, 3, -1, 1, 2, 1, 4, 5, 0, 0}; (0, 6, 0, -5, -2, -4, -3, -1, 6, 6, 0, 0}, {0, 6, 0, -5, -2, -3, -3, -1, 6, 6, 0, 0}; {-1, 5,-1, 6, -2, -3, -3, -1, 5, 5, 0,0}, {-4, 2, -4, 4, -4, -5, -4, -2, 5, 5, 0, 0}; {-5, 1, -5, 3, -5, 6, -5, -3 , 5, 5, 0, 0}; {4, -2, 4, 0, -4, -1, 0, -1, 3, 4, 0, 0}, {0, 4, -4, 2, -3, -2, -3, 4, 1, -2, 0, 0}; {-1, 3, -5, 1, -4, -3, -3, 4, 1, -2, 0, 0}; {0, 5, -2, 5, 2, 4, 3, 1, -3, -4, 0, 0}; {-3, 1, 5, -1, -5, -4, -5, 3, 0, -3, 0,0}; {3, -3, 3, -1, 0, 6, -3, -3, -5, -4, 0, 0}, {1,6, -1, , 6, 6, 0, 2, 0, -3, -1, 0, 0}; {5, -2, 3, -2, 0, -1, 0, 0, -5, 6, 0, 0}, {-3, 3, -3, 5, -4, -4, -4, -2, 5, 5, 0, 0}; {-3, 0, 3, -3, 3, 1, 3, -5, 4, 1, 0, 0}; {-1, 4, -3, 5, 4,-2, 1, 0, -3, -2, 0, 0}; {3, - 1, -5, -5, 1, -4, 0, 1, 4, -1, 0, 0}; {2, -2, 6, 6, 1, -5, 0, 1, 4, -1, 0, 0}; {0, -5, 2, 2, -5, 1, 4, 4, 6, 1,0, 0}, {1, -3, 5, 6, 0, -5, -1, 1,3, -1, 0, 0}; {-3, 4, -1, -1, 5, -1, 3, 4, 5, 0, 0, 0}; {-5, 1, -5, 6, -1, 4, -5, -5, -5, 1, 0, 0}; {-2, 5, 0, 0, 6, 0, 3, 4, 5, 0, 0, 0); {-5, 1, -5, 6, -1, 5, -5, 6, -5, -1, 0, 0}, {3, -3, 3, 3, -4, 2, 5, 5, 6, 0, 0, 0}; {-3, 3, -3, -3, 4, -2, -5, -5, 6, 0, 0, 0}; {4, -3, 2, 2, -4, 1, -2, -3, -5, 0, 0, 0}; {5, -1, 5, 6, 1, -5, 5, 6, 5,-1, 0, 0}; {5, -1, 5, 6, 1, -4, 5, 5, 5, -1, 0, 0}; {3, -4, 1, 1, -5, -1, -3, -4, -5, 0, 0, 0}; {-1, 3, -5, 6, 0, 5, 1, -1, -3, 1, 0, 0}; {0, 5, -2, -2, 5, -1, -4, -4, 6, -1, 0, 0}; {-2, 2, 6, 6, -1, 5, 0, -1, -4, 1,0, 0}, {-2, 2, 6, 6, 0, 5, 1, -1, -3, 1, 0, 0}; {-3, 1, 5, 5, 1, 4, 0, -2 -4, -1, 0, 0}: {-3, -1, 5, 5, -1, 4, 0, -1, -4, 1, 0, 0}; {-2, 3, -4, -3, 4, -2, -5, -5, 6, -1, 0, 0}; {3, 0, -3, 3, -3, -1, -3, 5, 4, -1, 0, 0}; {4, -2, 4, -4, 4, 5, 4, 2, -5, -5, 0, 0}; {-5, 2, -3, 2, 0, 1, 0, 0, 5, 6, 0, 0}; -1, 5, -1, 3, 5, 1, 1, 6, 5, -1, 0, 0}; {0, 5, 2, -5, -2, -4, - 3, -1, 3, 4, 0, 0}; {4, -2, 4, -3, 6, 6, 4, 3, -5, -5, 0, 0}; {2, -4, 2, -5, 4, 5, 3, 2, -5, -5, 0, 0}, {-3, 3, -3, 2, 0, -5, 4, 3, -1, 0, 0, 0}; {0, 6, 0, 5, 3, 4, 3, 1, 6, 6, 0, 0}; {6, 0, 6, ---1, 2, 0, -1, 0, -4, - 5, 0, 0}; {-4, 4, 1, -4, -4. 0, 4, 0, 3, 1, 0, 0}; {-1, 5, 0, 5, 3, 3, 2, 1, 6, -5, 0, 0}; {-3, 2, -4, 0, -2, -4, -5, 4, -4, -4, 0, 0}; {-1, 6, 2, --4, -2, -3, 4, -5, -1, 2, 0, 0}; {5, -2, 4, -3, 5, 6, 5, 3, -5, -5, 0, 0}; {-1, 5, 0, 6, -3, -4, -4, -2, 6, 6, 0, 0}; {-5, 1, -4, 3, -5, 6, -5, -3, 5, 5, 0, 0}; {5, -3, 2, -5, -3, 6, 3, -4, 6, 0, 0, 0} , {3, -5, 0, 5, -4, 5, 2, -5, 5, 0, 0, 0}; {0, 5, -1, 5, 5, -2, -2, 2, 2, 2, 0, 0}; {-5, 0, 6, 0, 2, 0, 0, 1, -4, -5, 0, 0}; {-4, 1, -5, 3, -5, 6, -4, -3, 5, 5, 0, 0}; {-3, 1, 6, 1, -5, -4, -4, 3, 1, -2, 0, 0}; {6, -3, 1, -5, 1 , 0, 1, 6, 3, 0, 0, 0}; {-5, -1, 4, 0, 3, -3, -4, 2, 0, -2, 0, 0}; {5, 0, -4, -4, 2, -3, 1, 2, 4, -1 , 0, 0}; {3, -2, 6, 6, 1, -4, 0, 1, 4, 1, 0, 0}; {-1, 5, 0, 0, 5, 0, 4, 4, 5, 0, 0, 0}; {5, -1, 6, 6, -1, -2, 4, 6, 2, 0, 0, 0}; {-1, 5, 0, 0, 6, 0, 3, 4, 5, 0, 0, 0}; {-1, 4, -2, -2, 4, -1, -4, -4, 6, -1, 0, 0 {-5, -1, -4, -3, 3, -1, -2, -4, 0, 0, 0} ; {-3, 1, 6, 5, --1, 4, 0, -2, -3, 1 0, 0}; {-2, 3, -3, -3, 4, -2, -5, -5, 6, -1, 0, 0}; {-5, -1, 4, 3, -2, 3, -1, -2, -4, 0, 0, 0}; {-4, 1, -5, -5, 3, -3, 6, 6, 6, -1, 0, 0}; {6, -2, 3, 2, -3, 2, -1, -3, -4, 0, 0, 0}, {3, 6, -2, -3, 3, -5, 3, 1, -2, 2, 0, 0}; -5, -4, 4, -3, 3, -1, -2, -4, 1, 0, 0}; -{6, 2, 3, 3, -1, -2, -4, 0, 0, 0}; {5, -3, 2, 2, -4, 2, -2, -3, -5, 0, 0, 0}; {5, 1, -2, 4, -2, 0, -3, 6, -4, -1, 0, 0}; J3, -2, 6, -1, 4, 5, 1, -2, -2, 0, 0, 0}; {5, -1, -5, -1, 1, 3, -3, 3, 3, 1, 0, 0}, {4, 1, 0, -5, 1, 6, 2, 2, 5, -3, 0, 0}; {3, -1, -3, 3, -3, -1, 6, -4, -5, -1, 0, 0}; {1, -3, -5, 1, -5, -2, 6, -5, 6, -3, 0, 0}, {2, -5, 2, -5, 4, 5, 3, 2, -5, -5, 0, 0}; {-1, 3, -3, 1, 0, 4, 1, -5, 6, 2, 0, 0}; {-2, 2, -4, 0, -1,3, 1, 6, 5, 3, 0, 0}; {5, -1, -5, 2, -5, -1, 3, 5, 4, 4, 0, 0,} {5, -1, -5, 2, -5, -1, 3, 6, 5, 4, 0, 0}; {0, 4, -2, 3, 6, 4, 0, 6, 4, 0, 0, 0}; {-3, 3, -1, 6, -5, -2, -4, -2, 3, 3, 0, 0}; {-4, -1, 4, -3, -1, -5, 3, -4, 5, 0, 0, 0}; {-5, -2. 3, 3, -4, -2, -5, -4, -4, 6, 0, 0, 0}; {0, 4, -2, 4, -2, -3, -1, -1, 4, 3, 0, 0}; {6, -3, 2, -5, 4, -5, -5, -3, 6, 3, 0, 0}; {6, -2, 4, -2, -4, 1, 0, 4, 4, 2, 0, 0}; {6, -2, 4, -2, -3, 2, 1, 5, 4, 2, 0, 0}; 4, -3, 4, 0, 0, 6, -5, -1, 1, -1, 0, 0}, {-1, 2, -5, 1, 0, 4, 3, 6, 5, 3, 0, 0}; {3, 5, -3, 2, 3, -1, 6, -1, -5, 0, 0}; {-2, 1, 6, 0, -5, -4, -2, 2, 4, 2, 0, 0}; {-3, 2, -3, 6, -3, 3, 4, -1, -2, -3, 0, 0}; {1, 3, -5, 1, 2, -3, 4, -3, 5, 0, 0, 0}; {0, 2, 6, 0, 1, -3, 4, -3, 5, 0, 0, 0); {-3, -1, 3, -2, 6, -2,

5, -3, -5, 5, 0, 0}; 0, 3, -4, -5, 1, 6, 1, 0, -3, 1, 0, 0}; {-4, 3, 0, 4, -4, -3, 4, 0, 0, -1, 0, 0}; {-4, 4, 2, -5, 0, 3, -2, -5, -2, 0, 0, 0}; {-5, 3, 1, 6, -1, -2, -2, -5, -2, 0, 0, 0}; {5, 1, 0, 5, -2, 2, -3, 6, -2, 0, 0, 0}; {-4, 4, 3, -3, 3, -5, 4, 5, 5, -4, 0, 0}; {4, -1, -3, 3, -3, -1, -5, -4, 6, -2, 0, 0}, {-1, 5, 2, -4, -4, 1, 5, -1, 1, 0, 0, 0}; {-3, 3, 0, 6, -5, -1, -5, -2, 3, 2, 0, 0}; {2, 6, 1, 6, 6, -1, -2, 4, 3, 1, 0, 0}; {-1, 2, -4, 0, 0, 4, 2, -5, 5, 2, 0, 0}; {-2, 4, 1, -4, 3, -5, -1, 4, 4, 3, 0, 0}; {-5, -1, 6, -1 , -3, 1, 2, 5, 4, 2, 0, 0}; {4, -4, 3, -4, -5, 0, -1, 4, 4, 1, 0, 0}; (4, -4, 3, -4, -5, 0, -1, 4, 4, 2, 0, 0}; {2, 5, -1, 3, 1, 5, 3, -4, 6, 3, 0, 0}; {1, -4, -2, 3, 1, 5, 3, -5, 6, 3, 0, 0}; {3, -4, 4, -1, 1, 5, 6, -1, 1, -1, 0, 0}; {-2, 1, 5, 0, -1, 3, 2, 6, 5, 3, 0, 0}; {-2, 4, 1, -3, 3, -5, 0, 3, 3, 3, 0, 0}; {6, -2, 5, -1, 5, 5, -4, -4, 5, 5, 0, 0); {5, -3, -4, -2, 5, 5, -5, -4, 5, 5, 0, 0}; 5, -2, 6, 1, 0, 6, 5, 0, 2, 0, 0, 0}; {1, 4, 2, 3, 0, 4, 4, -4, 6, 3, 0, 0}; {0, 2, -5, 0, 1, -3, 4, -3, 5, 0, 0, 0}; {-2, 0, 5, -2, 0, -4, 4, -3, 6, 0, 0, 0}; {5, -5, 0, 6, 3, -5, 5, -4, 6, 5, 0, 0}; {-5, -2, 4, -1, 5, -4, -5, 3, 0, -2, 0, 0}; {-3, -1, 4, 2, 4, -1, 6, 1, 0, 4, 0, 0}; {5, -5, 1, -1, 2, -3, 4, -1, -1, 3, 0, 0}; {-2, -5, -4, 2, -3, 2, 0, 2, 3, -5, 0, 0}; {0, -5, 6, -1, 3, 6, 1, --3, -1, 0, 0}; {5, 0, -1, 5, 5, -3, 3, -2, 1, 0, 0, 0}; {1, -4, -5, 1, 3, -5, 1, -3, 0, -1, 0, 0}; {-5, 2, -1, -5, -2, 3, -3, 6, -2, 0, 0, 0}; {0, 6, 4, -2, -4, 1, 5, -1, -1, -1, 0, 0}; {-1, 4, -1, -5, -3, 3, -4, -1, 0, -2, 0, 0}; {-2, 4, 2, -3, 1, 5, 4, 5, 1, 2, 0, 0} ; {-3, -1. 5, -2, -1., -5, 3, -4, 5, -1, 0, 0}; {-5, -3 3, -4, -2, 6, 1, -5, 4,-1, 0, 0}; {6, -5, 0, 4, 5, 0, -5, -1, -5, 1, 0, 0}; {0, 4, 0, -5, -1, 4, 5, 1, -1, -3, 0, 0}; {2, -3, -3, 3, 5, 1, -4, 1, -2, -1, 0, 0}; {-3, 3, 2, -4, -3, 5, -1, 3, 0, 0, 0, 0}; {-4, 2, 1, -5, -4, 4, -2, 2, 0, 0, 0, 0}, {-3, -1, 6, -4, 6, -2, 5, -1, -4, 5, 0, 0}; {1, -4, -4, 3, 2, 6, 0, -3, 0, -1, 0, 0}; {-1, 5, 4, -2, -4, 0, 5, 0, 2, 1, 0, 0}; {0, -5, -5, 2, 1, 6, 0, -4, -1, -1, 0, 0}; {-1, 6, 6, 1, 1, 6, 0, -4, -1, -1, 0, 0}; {-4, 2, 1, -5, 6, -1, 3, -2, 1, 0, 0 0}; ; {-3, 4, 4, -1, -1, 5, -2, 6, -2, -2, 0, 0}; (-4, 3, 3, -2, -2, 4, -2, 6, -2, -1 , 0, 0}; {-4, 3, 3, -2, -1, 4, -2, -5, -1 , -1, 0, 0}; {-5, 1, 0, 6, 6, -2, 4, -1, -1, 0, 0, 0}; {-4, 3, 3, -2, -1,4, -1, -5, -1, -1, 0, 0}; {3, 5, 0, 3, -4, 4, 2, -5, 5, -1, 0, 0}; {-3, 3, 2, -3, 6, -3, 3, 0, 1, -1,0, 0}; {1, 4, 0, -5, -1, -4, 5, 1, -1, -4, 0, 0}; {-3, -2, 4, -2, -1, -5, 2, -5, 4, -1, 0, 0}; {-4, 2, 2, -5, -3, 4, -2, 3, 0, 0, 0, 0}; {5, -3. -5, -1, -3, 4, -4, -3, 5, 4, 0, 0}; {-5, 3, 5, 1, 3, -4, 4, 3, -5, -4, 0, 0}; 6, 0, 0, 6, -5, 3, -2, 2, -1, 0, 0, 0}; {6, 0, 0, 6, -5, 3, -2, 3, -1, 0, 0, 0}; {-4, 2, 2, -4, 6, -2, 4, -1, 1, 1,0, 0}; {-5, 1, 1, -5, 5, -3, 3, -2, 1, 1, 0, 0}; {6, 0, 0, 6, 5, -3, 2, -2, 1, 0, 0, 0}; {6, 0, 0, 6, 5, -3, 3, -2, 1, 0, 0, 0}; {4, -2, -2, 5, 3, -4, 2, -3, 0, 0, 0, 0}; {6, 3, -5, 2, -4, 6, 5, 3, 6, -5, 0, 0}; {-3, -5, 0, -3,

4, -4, -2, 5, -5, 1, 0, 0}; {-4, 3, 5, -1, -5, 2, 6, -5, 0, 0, 0, 0}; {4, -2, -1, 5, 4, -4, 2, -2, 0, 0, 0, 0}, {-1, 4, 4, -3, -2, 6, 0, 3, 0, 1, 0, 0}; {0, -5, -3, 4, -4, 5, 1, -5, -5, -2, 0, 0}; {5, -2, -2, 3, 0, 4, -4, 3, 1, 2, 0, 0}, {0, 6, -5,2, 0, 5, 0, -4, -1, 0, 0, 0}; {-2, 3, 3, -3, -5, -1, -4, -1, 2, 1, 0, 0}; 3, -4, -4, 2, -2, 1, -5, 3, 1, 1, 0, 0}; {2, -4, -3, 4, 1, 6, 1, -3, -1, 0, 0, 0}; {0, 4, 3, -4, 3, 6, -1, 6, 4, 2, 0, 0}; {-5, 5, -1, -1, -2, 3, -4, 1, 1, -3, 0, 0}; {-1, --3, 3, -4, 6, 3, -2, 0, -5, -1, 0, 0}; {-4, -4, -4, 1, -5, -4, 6, 4, -5, -5, 0, 0}; {6, 5, 0, -4, -5, 0, 5, 1, 5, -1, 0, 0}; {5, 3, -3, 4, 2, 6, -1, 5, -4, 1, 0, 0}; {3, 1 -5, 2, 1, 5, -3, 4, -5, 1, 0, 0}; {4, -1, 2, -5, 0, -1, 3, -5, -4, -3, 0, 0}; {3, -2, 1, -5, 1, -2, -4, 6, -5, -3, 0, 0}; {-4, 1, 2, -5, -4, 4, -2, 5, 0, 1, 0, 0}; {2, -4, -2, 4, 0, 5, -3, -3, -1, -1, 0, 0}; {5, -2, -1, 5, 2, -3, 3, 6, 2, 0, 0, 0}; {2, 5, 4, -2, 3, -2, 0, -2, -3, 5, 0, 0}; {-5, -1, 0, -5, 2, -2, 3, 6, 2, 0, 0, 0}; {3, 1, -4, -2, -4, 1, 6, -1, 0, -4, 0, 0}; {2, -1, 5, -2, -5, 5, 0, -1, -4, -1, 0, 0}; {2, 0, -5, 2, 0, 4, -4, 3, 6, 0, 0, 0}; {0, -2, 5, 0, -1, 3, -4, 3, -5, 0, 0, 0}; {4, -1, 3, -4, 2, -1, - 4, 6, -5, -4, 0, 0}; {2, -4, -1, 3, - 3, 5, 0, -3, -3, -3, 0, 0}; {4, -2, 1, 6, 0, -1, -3, -5, 4, -3, 0, 0}; {-1, 5, -4, 1, -5, 3, -1, -4, 4, 3, 0, 0}; {-2, 4, -5, 0, 6, 2, -1, -4, 4, -3, 0, 0}; {3, -3,0, 6, 5, 1, 5, 2, -3, -2, 0, 0}; {5, 2, -4, 5, 1, 5, -4, 4, 6, 0, 0, 0}; {3, 3, 0, 1, -5, 0, 6, 2, -4, -4, 0, 0}; {4, -4, -3, 3, -3, 5, -4, -5, -5, 4, 0, 0}; {-1, 3, 5, -1, 5, 2, 6, 5, 6, 3, 0, 0}; {-3, 1, 3, -3, 3, 1, 6, 4, 5, 1, 0, 0}; {-4, -1, 0, 5, -1, 6, -2, -2, -5, 3, 0, 0}; {-5, -1, 1, -4, 2, -1, 3, 6, 4, 1, 0, 0}; {5, -3, -1, 6. 1, -2, 2, 5, 2, 0, 0, 0}; {4, -4, -2, 5, 0, -3, 2, 5, 2, 0, 0, 0}; {4, -3, 0, -4, 4, 3, -4, 0, 0, 1, 0, 0}; {4, -2, 2, -1, -1, 6, -1, -3, -5, -4, 0, 0}; {0, -3, 4, 5, -1, 6, -1, 0, 3, -1, 0, 0}; {0, -2, 6, 0, -1, 3, -4, 3, -5, 0, 0, 0}; {-1, -3, 5, -1, -2, 3, -4, 3, -5, 0, 0, 0}; {-5, 2, -5, -1, 6, -5, 6, 4, -5, -5, 0, 0}; {-5, 3, -3, 2, -2, 0, 1, 0, 4, 5, 0, 0}; {-3, -5, 3, -2, -3, 1, 6, 1, 5, -1, 0, 0}; {-3, 5, -1, 5, -1, 1, 2, 1, 4, 5, 0, 0}; {-4, 4, -2, 4, -2, 1, 2, 1, 4, 5, 0, 0}; {-5, 3, -3, 3, -2, 0, 1, 0, 4, 5, 0, 0}; {4, -1, 4, -3, 4, 5, 5, 3, 6, 6, 0, 0}; {1, -4, 1, 6, 1, 2, 6, 5, 1, -1, 0, 0}; {2, -3, 2, -5, 3, 4, 4, 2, 6, 6, 0, 0}; {5, 2, -3, 4, 2, 5, -4, 4, 6, 0, 0, 0}, {4, 1, -4, 3, 1, 5, -3, 4, -5, 0, 0, 0}; {-5, 3, -3, 5, 3, -5, -3, 4, 6, 0, 0, 0}; {-2, 6, 0, -4, 4, -5, -2, 5, -5, 0, 0, 0}; {3, -2, 3, -1, 0, 6, -2, -3, -5, -4, 0, 0}; {0, -5, 0, -4, 1, 3, 2, 1, 5, 5, 0, 0}; {-1, 6, 0, -4, 3, 2, 2, -4, -1, 2, 0, 0}; {6, 1, -5, 3, -5, 6, -5, -2, 3, 4, 0, 0}; {-1, 5, -2, 6, -1, 2, 2, 0, 4, 4, 0, 0}; {-3, 2, 6, 1, -4, -5, -1, 2, 2, 0, 0, 0}; {-5, -1, 2, -4, 2, 0, 3, 6, 4, 1, 0, 0}; {5, -1, 4, 1, -2, -3, 3, -4, -2, -1, 0, 0}; {0, -4, 3, 3, -4, -4, 0, 4, 0, 1, 0, 0}; {-5, 3, -2, -2, 4, -2, 2, 3, 5, 0, 0, 0}; {6, 2, -3, -3, 3, -3, 1, 2, 4, 0, 0, 0}; {5, 1, -4, -4, 3, -3, 1, 2, 4, -1, 0, 0}; {6, 2, -3, -2, 3, -2, 1, 3, 4, 0, 0, 0}; {4, -1, 5, 5, -3, 3, 6, 6, 6, 1, 0, 0}; {5, 1, -4, -3, 2, -3, 1, 2, 4, 0, 0, 0}; {5, 1, -4, -3, 3, -3, 1, 2, 4, 0, 0, 0}; {2, -3, 3, 3, -4, 2, 5, 5, 6, 1, 0, 0}; {1, -4, 2, 2, -4, 1, 4, 4, 6, 1, 0, 0,}; {1, -5, 0, 0, 6, 0, -3, -4, -5, 0, 0, 0}; {-5, 1, 6, 6, 1, 2, -4, 6, -2, 0, 0, 0}; {1, -5, 0, 0, -5, 0, -4, -4, -5, 0, 0, 0}; {-3, 2, 6, 6, -1, 4, 0, -1, -4, 1, 0, 0}; {-5, 0, 4, 4, -2, 3, -1, -2, -4, 0, 0, 0}; {6, -1, 3, 3, -2, 3, -1, -3, -4, 1, 0, 0}; 1, -3, 6, 0, 3, -1, 2, 3, 3, -4, 0, 0}; {6, 3, -1, 5, -1, 0, -1, 6, -3, 0, 0, 0}; {6, 2, -3, 2, -4, -1, 3, 4, -1, -1, 0, 0}; {3, -2, 4, -4, 3, 4, 5, 3, 6, 6, 0, 0}; {4, -1, 5, -3, 5, 6, 4, 3, -5, 5, 0, 0}; {1, -4, 2, 6, 2, 3, 4, 2, 6, 6, 0, 0}; {1, -4, 2, -5, 3, 4, 3, 2, 6, 6, 0, 0}; {-2, 5, -1, 4, 1, 2, 2, 1, 5, 6, 0, 0}; {5, -1, 4, -3, 5, 6, 5, 3, -5, -5, 0, 0}; {-5, 3, -2, 5, 3, 6, -3, 4, 6, 0, 0, 0}; {-3, 4, -2, 4, -1, 1, 2, 1, 4, 5, 0, 0}; {-5, 2, -4, 2, -2, 0, 1, 0, 4, 5, 0, 0}; {--3, 5, 0, -5, 4, -5, -2, 5, -5, 0, 0, 0}; {6, 0, 5, -1, -5, -5, 5, 4, -4, -4, 0, 0}; {2, -4, 1, -5, 3, 4, 4, 2, 6, 6, 0, 0}; {2, -4, 1, -5, 4, 4, 4, 2, 6, -5, 0, 0}; {-1, 6, 0, -5, -2, -4, -3, -1, 5, 5, 0, 0}; {-1, 6, 0, -5, -2, -3, -3, -1, 5, 5, 0, 0}; {-4, 3, -3, 4, -4, -5, -4, -2, 5, 5, 0, 0}; {-5, 2, -4, 3, -5, 6, -5, -3, 5, 5, 0, 0}; et {-5, 2, -4, 3, -4, -5, -5, -1, 2, 4, 0, 0}; et {-2, 5, -1, 6, -1, 2, 3, 1, 4, 5, 0, 0};

{-3, 2, -5, 0, -1, -3, -5, 5, -3, -4, 0, 0}; {6, 0, 6, 0, 4, -5, -4, 2, 0, -2, 0, 0}; {0, 0, 0, 1, 10, 8, 5, 0, 4, 9, 10, 2}; {1, -5, 1, -3, -5, -1, -1, 6, -5, 1, 0, 0}; {-4, 1, 6, 1, -2, 6, 0, 2, 4, 3, 0, 0}; {-3, 1, 5, 0, -5, -3, -4, 3, 0, -2, 0, 0}; {4, 5, 6, -2, 3, -1, 4, -1, -2, 4, 0, 0}; {-4, -1, 2, -4, 6, -2, -4, -5, -4, 3, 0, 0}; {-2, 3, -4, 4, 5, 6, 1, 1, -3, -5, 0, 0}; {0, 0, 0, 4, 8, 11, 9, 6, 10, 5, 0, 11}; {2, -4, 2, 1, 6, 4, -5, -1, 3, 1, 0, 0}; {5, 3, 1, 5, 1, 3, -2, 5, 6, -3, 0, 0}; {4, 6, -4, 4, -3, 6, 0, 6, 6, 3, 0, 0}; {-4, 0, 4, 3, -2, 3, -1, -2, -5, 0, 0, 0}; {-5, -5, -5, 2, 6, -2, 6, 4, -3, 6, 0, 0}, {-2, -4, 6, 0, -5, -3, -5, 3, -4, -1, 0, 0}; {1, -2, -5, 0, 5, 0, 3, 2, 4, 6, 0, 0}; {2, -3, 4, -4, -5, 6, -1, -1, 3, 5, 0, 0}; {4, 0, -4, 2, 1, 4, -4, 3, 5, 0, 0, 0}; {3, -2, 5, -2, 0, -2, -3, 3, 3, -2, 0, 0}; {5, -1, 5, -2, 0, 0, -1, 0, -4, 6, 0, 0}; {6, 1, -3, 3, -4, 0, 4, 6, 6, 5, 0, 0}; {6, 0, -5, 1, 0, 2, 0, 0, 5, 5, 0, 0}; {-1, 6, 2, -2, 3, -4, 0, 3, 3, 3, 0, 0}; {-1, 5, 0, -5, 3, 2, 2, -5, -2, 1, 0, 0}; {1, 6, 0, -5, 4, -2, 0, 3, 3, 3, 0, 0}; {0, 0, 1, 3, 11, 7, 11, 4, 5, 0, 0, 7}; {6, -3, 1, -5, -2, -5, 3, -4, 6, 1, 0, 0}; {0, 2, 5, -2, 5, 3, 3, -3, 4, 0, 0, 0}; {-4, 1, -5, 4, -4, -5, -4, -2, 5, 4, 0, 0}; {2, 4, -5, 1, 5, 0, -5, 5, 3, -1, 0, 0}; {0, 0, 1, 5, 9, 2, 10, 3, 0, 8, 4, 4}; {-2, -1, 1, -5, 3, 6, 2, 0, -1, 6, 0, 0}; {0, 0, 1, 6, 3, -1, 4, 6, 1, 5, 0, 0}; {-5, 1, -4, -5, -1, 5, -5, -5, -4, 2, 0, 0}; {1, -5, 2, 1, 5, 0, 1, -3, -5, -4, 0, 0};

{-4, 0, 5, 2, -3, -4, 4, -2, 1, 1, 0, 0}; {0, 0, 1, 6, 11, 3, 10, 7, 4, 11, 2, 1}; {5, -1, 6, 6, 5, 2, -5, 4, 6, -4, 0, 0}; {-2, -5, 5, -4, 4, 6, 1, 6, -4, -4, 0, 0}; {-4, 3, -1, 0, 6, 6, -1, 3, -1, -1, 0, 0}; {0, 0, 1, 9, 0, 1, 6, 1, 8, 8, 5, 0}; {0, 0, 1, 9, 2, 5, 4, 8, 5, 1, 0, 6}; {-1, -5, 4, -4, 3, 5, 0, 6, -5, -1, 0, 0}; {0, 0, 1, 10, 1, 8, 11, 3, 2, 8, 7, 2}; {2, -4, 3, -5, -5, 5, -2, 0, 4, 4, 0, 0}; {2, -4, 3, -5, -5, 5, -1, 0, 3, 4, 0, 0}; {0, 0, 2, 0, 8, 9, 6, 10, 3, 9, 9, 2}; {-3, 1, -5, -2, -2, 3, -1, 6, 5, 1, 0, 0}; {3, -4, 3, -4, 5, 5, 2, 2, -4, -3, 0, 0}; {-1, 0, 3, 4, -1, -5, 2, -5, 2, 3, 0, 0}; {-5, 0, -5, 1, 3, -4, -4, 2, 1, 0, 0, 0}; {4, -5, 0, 4, 2, 6, 3, -4, 6, 4, 0, 0}; {0, 4, -2, 4, -3, -4, -1, -2, 6, 5, 0, 0}; {5, -4, 1, 6, 1, -1, 1, 0, 6, 3, 0, 0}; {-1, 6, 3, 1, 6, -1, -2, 0, -5, -1, 0, 0}; {3, 6, -1, 5, 0, -2, 0, -2, -4, -5, 0, 0}; {3, -3, 5, 2, 2, -3, 1, -5, -3, -1, 0, 0}; {4, -5, 0, -5, -4, 0, 2, 1, 5, 1, 0, 0}; {-3, 0, 5, 0, -5, -3, -5, 3, 0, -2, 0, 0}; {0, 0, 2, 7, 6, 4, 11, 8, 5, 9, 4, 7}; {-3, 0, 5, 2, -5, 3, -1, -2, 2, 2, 0, 0}; {-1, -1, 1, -4, 6, -3, 3, -2, -1, 5, 0, 0}; {3, 6, -1, -2, 3, -5, 3, 1, -2, 2, 0, 0}; {3, -1, -3, 1, 2, 5, 3, -5, 1, 4, 0, 0}; {0, 0, 2, 10, 4, 0, 11, 9, 6, 0, 3, 5}; {4, -2, 6, 3, -4, 6, 1, 0, 3, 6, 0, 0}; {-1, 0, 3, 1, 0, -5, -2, 5, 1, 6, 0, 0}; {0, 0, 2, 11, 10, 4, 6, 9, 3, 8, 2, 9}; (0, 0, 2, 11, 11, 5, 6, 2, 5, 10, 6, 1}; -5, -2, 4, 4, -2, 3, 0, -2, -4, 0, 0, 0}; {6, 6, -3, -5, 3, -2, 2, -4, 3, 5, 0, 0}; {0, -4, -5, 1, -5, -2, 5, -4, -5, -1, 0, 0}; {-4, 4, 3, -2, 1, 5, -1, -4, -1, -2, 0, 0}; {2, -5, 3, -4, 3, 3, 6, -5, 4, 5, 0, 0}; {0, 0, 3, 3, 7, 1, 5, 3, 1, 11, 7, 11}; {0, 0, 3, 3, 11, 8, 5, 7, 3, 6, 11, 4}; {1, 6, 2, -4, -2, 0, -2, -1, 4, 3, 0, 0}: {0, 0, 3, 4, 11, 1, 7, 10, 5, 11, 6, 3}; {2, -2, -3, -5, 0, 5, -4, -4, 1, -3, 0, 0}; {-3, 5, 4, 3, -3, 2, 5, -5, 0, -3, 0, 0}; {0, 0, 3, 6, 5, 2, 7, 4, 3, 1, 7, 0}; {-3, 1, -4, 3, 6, -2, -3, 5, 1, -1, 0, 0}; {-1, 2, -4, 2, -4, 6, 1, 2, -2, -2, 0, 0}; {-1, 2, -4, 2, -4, -4, -1, 2, 4, 2, 0, 0}; {0, 0, 3, 8, 2, 2, 9, 7, 6, 2, 6, 3}; {0, 0, 3, 8, 10, 7, 4, 3, 8, 4, 8, 6}; {3, 2, 4, -3, 6, -1, 5, 0, 1, 5, 0, 0}; {2, 1, 3, 4, 5, -2, 5, 0, 1, 5, 0, 0}; {-5, 3, 2, 5, 3, 0, 4, 3, 5, -4, 0, 0}; {-3, 0, 6, 5, 0, 2, 4, 4, -1, -1, 0, 0}; {0, 0, 4, 0, 6, 1, 9, 7, 6, 2, 5, 8}; {-2, 1, -4, -4, 4, -4, 3, -1, -4, -2, 0, 0}; {0, 0, 4, 1, 8, 3, 5, 3, 2, 9, 11, 4}; {5, 1, 1, 6, -1, 2, -2, -5, -3, -3, 0, 0}; {-5, 4, 5, -1, 6, -5, 1, 5, 5, -2, 0, 0}; {6, 3, 4, 0, 6, 4, -2, 4, 6, -2, 0, 0}; {-5, 6, -3, -5, 3, -1, 2, -2, 3, 6, 0, 0}; {-2, 2, -2, 1, 5, -2, -2, 6, 4, -1, 0, 0}; {-5, -1, -5, -2, 4, -1, -4, 4, 5, 6, 0, 0}; {6, 6, -2, -3, 4, -2, 5, -3, 3, 3, 0, 0}; {3, 3, -5, -5, 1, -3, 3, -4, 2, 3, 0, 0}; {1, 4, -1, 4, -3, -3, 0, -2, 6, 2, 0, 0}; {6, 1, 0, -2, 3, -5, -2, -3, 2, -2, 0, 0 {3, -5, 3, -1, -5, 6, 2, 5, -2, 0, 0, 0}; {0, 1, 6, -1, 6, 3, 4, -1, -2, 2, 0, 0}; {0, 0, 4, 8, 6, 2, 2, 11, 3, 4, 0, 5}; {-1, 6, 5, 4, -2, 1, -2, 0, 1, -4, 0, 0}; {6, -4, 2, -4, -1, 4, 1, -5, 3, 0, 0, 0}; {0, 4, 0, -4, 2, -2, -2, 6, -4, 0, 0, 0}; {0, 0, 4, 8, 10, 3, 11, 4, 2, 2, 11, 6}; {-3, 1, -3, 6, -4, 6, 5, -1, -5, -4, 0, 0}; {1, 3, -3, 4, 6, -3, 2, 0, 5, 1, 0, 0}; {0, 0, 4, 10, 2, 4, 7, 6, 10, 7, 5, 3}; {1, 4, -1, -3, -1, -4, 5, -2, -2, -5, 0, 0}; {0, 0, 4, 11, 11, 0, 11, 9, 3, 5, 2, 8}; {5, 1, 2, 6, 0, 2, -2, 6, -3, -4, 0, 0}; {3, -3, -4, -1, 3, -2, -5, -5, -1, 4, 0, 0}; {0, 0, 5, 2, 1, 2, 1, 9, 6, 10, 3, 8}; {0, 0, 5, 2, 1, 5, 2, 5, 0, 10, 0, 7}; {2, -4, -5, -1, 2, -4, -4, 4, -1, 1, 0, 0}; {5, 2, 4, -1, 5, 6, 1, 5, 5, -3, 0, 0}; {5, 0, 0, 5, -4, 3, 5, 1, -3, 0, 0, 0}; {0, -3, -1, -5, 2, -3, -4, 3, -5, -2, 0, 0}; {0, -4, -3, 4, -2, -5, 1, 6, -5, -1, 0, 0}; {-3, -5, -2, -4, 4, -4, 1, 6, -4, 6, 0, 0}; {3, 6, 2, 5, -5, 2, -2, 5, 5, 5, 0, 0}; {2, -4, -5, 1, 1, -5, 2, 6, 1, 1, 0, 0}; {-4, 2, 1, -4, -2, 3, -3, 6, -2, 0, 0, 0}; {-5, 4, 6, 4, -3, 0, -4, 2, 2, -4, 0, 0}; {-3, -1, 6, -3, 1, 0, 4, 2, -5, 3, 0, 0}; {-1, 4, 2, -3, -4, 0, 6, -2, 2, 0, 0, 0}; {-1, 0, 6, -3, 6, -2, 6, -1, -4, 6, 0, 0}; {-3, -1, 6, -2, 3, 1, 0, 5, 3, -2, 0, 0}; {-4, -1, -5, 1, 0, 5, 0, 3, 5, 4, 0, 0}; {0, -1, 3, 5, 4, -1, 4, 5, 0, 4, 0, 0}; {-1, -1, 4, -5, -4, 3, -2, 1, -3, 2, 0, 0}; {2, -4, -4, -1, 2, -3, -4, 4, -1, 2, 0, 0}; {-3, -5, -1, -5, 4, 3, -3, -1, 5, -2, 0, 0}; {-3, 1, -1, 1, 5, 1, -3, 5, 3, 4, 0, 0}; {-2, -3, 2, -1, 3, 4, -3, 2, 5, 2, 0, 0}; {--4, -5, 0, -2, -4, -3, 3, 6, 2, -5, 0, 0}; {0, 0, 6, 5, 8, 6, 6, 8, 1, 6, 11, 7}; {-5, 5, -3, 6, -4, 1, -3, 1, 4, 6, 0, 0}; {-4, 1, 0, 5, 1, 4, -2, 4, 4, 1, 0, 0}; {6, -3, 6, -3, 3, 6, -5, -1, -5, 4, 0, 0}; {4, 2, 6, 4, 6, 0, -4, 0, 3, 6, 0, 0}; {-4, 2, 2, -4, 6, -1, 4, -1, 0, 0, 0, 0}; {-4, 6, -2, -3, 1, -5, 0, 3, 6, 3, 0, 0}; {0, 0, 6, 7, 5, 5, 0, 4, 6, 3, 10, 4}; {-4, -1, -4, 1, -3, 2, 3, -3, 4, 3, 0, 0}; {4 -5, 4, -3, 2, 4, -2, -4, 4, 0, 0, 0}; {-2, 4, 4, 1, -2, 3, 4, -4, 1, -2, 0, 0}; {4, -5, 4, -2, -2, 3, -2, 1, 4, 3, 0, 0}; {0, 0, 6, 9, 6, 10, 5, 9, 8, 1, 11, 9}; {0, 0, 6, 9, 11, 3, 11, 3, 0, 1, 9, 4}; {0, 0, 6, 10, 2, 1, 4, 0, 8, 8, 11, 8}; {-2, -3, 2, 6, 1, -5, -3, 3, 1, -2, 0, 0}; {6, 4, -3, 2, -2, 5, 5, -2, 0, 3, 0, 0}; {4, 2, -5, 0, -3, 6, 0, 2, --4 0, 0, 0}; {3, 0, 4, -2, 0, 6, 0, -3, -5, -3, 0, 0}; {0, 0, 7, 5, 0, 9, 2, 9, 3, 6, 4, 5}; {-3, 5, -4, 2, 2, -2, 2, -1, -4, -3, 0, 0}; {-2, -3, 3, 1, -4, -3, 4, -4, 2, -2, 0, 0}; {-1, 6, -4, 2, -5, 3, 0, -4, -3, -2, 0, 0}; {-3, 2, 2, 6, -1, -5, 3, 3, 0, 3, 0, 0}; {0, 0, 7, 6, 9, 3, 3, 1, 3, 5, 1, 5}; {-3, -5, 0, -2, 2, 4, -3, 2, 5, 2, 0, 0}; {1, -3, 0, -4, 1, -2, -4, 4, -5, -3, 0, 0}; {-3, 6, -2, -5, -4, 2, -2, 1, 4, 6, 0, 0}; {0, 0, 7, 8, 2, 1, 9, 4, 9, 7, 8, 10}; {0, 3, 1, 5, -2, 3, 4, -3, 5, 2, 0, 0}; {-2, 4, 5, 1, -2, 4, 4, -4, 1, -1, 0, 0}; {-5, 0, 0, -5, 4, -3, -5, -1, 3, 0, 0, 0}; {4, -1, 1, -2, 6, -3, -5, -1, -1, -5, 0, 0,}; {-4, 0, -1, 6, 0, 1, -5, 3, 5, 1, 0, 0}; {0, 0, 7, 111, 5, 3, 6, 3, 0, 0, 4, 3}; {0, 0, -5, -1, 6, -4, 1, -3, 6, -1, 0, 0}; {0, 0, 7, 11, 10, 11, 4, 3, 7, 0, 8, 8}; {-4, 5, -2, 0, 6, -4, 5, 2, -3, 0, 0, 0}; {0, 4, 4, 2, 2, -3, -1, 4, -2, -5, 0, 0}; {0, 0, 8, 3, 3, 2, 4, 10, 2, 0, 8, 0}; {2, 1, -4, 2, 3, -3, 3, 6, 4, -2, 0, 0}; {4, 2, -4, 2, 5, 1, 6, 5, 5, 6, 0, 0}; {1, -3, 1, 6, 6, -3, 1, 0, -2, 3, 0, 0}; {2, -1, 4, -1, 6, 5, 1, 2, -4, -1, 0, 0}; {4, 2, -4, 4, 1, 5, -4, 4, 6, 0, 0, 0}; {1, -3, 1, -4, 0, -3, -3, 0, 6, 6, 0, 0}; {-3, 5, -3, 4, -2, 4, 6, 4, -5, 4, 0, 0}; {-2, -5, 0, -4, 6, 5, -4, -1, 5, -3, 0, 0}; {0, 0, 8, 8, 0, 10, 8, 2, 7, 2, 9, 0}; {3, -3, -1, 5, 5, 1, 5, 1, -3, -1, 0, 0}; {-4, -5, 2, 1, 6, -3, 3, -3, 1, -1, 0, 0}; {0, 0, 8, 8, 2, 8, 3, 10, 2, 0, 2, 4}; {6, -2, -2, 2, 3, -2, 3, -3, 3, 2, 0, 0}; {-5, 6, 1, 0, 2, -1, 4, -1, 2, -5, 0, 0}; {-2, 1, 0, -3, -3, -1, 5, -2, -5, 4, 0, 0}; {-3, 1, 1, 6, 3, -1, 4, 6, 3, 2, 0, 0}; {6, -1, 0, 6, 5, -4, 2, -3, 1, 0, 0, 0}; {-3, 3, 5, 0, -4, 1, -2, -4, -3, -4, 0, 0}; {-4, 0, 0, 6, 0, -5, -2, -4, -4, 5, 0, 0}; {0, 0, 8, 10, 0, 7, 2, 0, 4, 8, 6, 9}; {4, 1, 6, 5, -3, 5, -2, 2, 5, 2, 0, 0}; {0, 0, 8, 11, 9, 4, 11, 2, 6, 5, 5, 10}; {0, 0, 9, 0, 5, 10, 10, 10, 3, 11, 5, 3}; {-4, 6, 1, 2, -4, 4, -3, -1, 2, -1, 0, 0); {-1, 5, -4, 6, 1, 6, 4, -4, -3, 3, 0, 0}; {0, 0, 9, 2, 3, 1, 9, 1, 10, 5, 6, 9}; {3, 3, 0, 5, -5, 4, -3, 2, 1, 6, 0, 0}; {-5, 2, 6, -5, -4, -2, 4, -3, 5, 3, 0, 0}; {0, 0, 9, 3, 10, 3, 4, 1, 4, 9, 10, 1}; {-5, 4, -2, 2, -3, -1, 3, 3, -1, -2, 0, 0}; {-2, -3, 5, -1, -2, 3, -4, 3, -5, 0, 0, 0}; {6, 5, 1, -5, -5, 0, 5, 1, 6, -1, 0, 0); {5, 4, 0, -5, 3, -4, 2, 5, -4, 0, 0, 0}; {-1, 6, -2, 1, -3, -2, -5, 4, -5, -5, 0, 0}; {0, 0, 9, 5, 10, 0, 5, 1, 6, 6, 8, 4}; {3, -2, 2, 5, 5, 5, 6, 1, 6, 4, 0, 0}; {0, 0, 9, 5, 11, 11, 0, 4, 8, 3, 6, 7}; {-4, 3, -5, -1, -5, -4, 6, 4, -5, -5, 0, 0}; {3, -5, -4, -3, 3, -2, -5, 5, 0, 3, 0, 0}; {0, -5, -1, 4, 4, 0, 3, 1, -3, -3, 0, 0}; {0, 5, -5, -2, -1, -3, -4, 3, -3, 3, 0, 0}; {0, 0, 9, 8, 2, 5, 0, 6, 7, 11, 9, 2}; {-2, -2, -5, 6, 0, 5, -1, 4, -3, -3, 0, 0}; {2, -2, 3, -2, 4, 5, 2, 2, 5, 5, 0, 0}; {3, -3, 0, 6, 5, 1, 4, 1, -3, -2, 0, 0}; {2, -2, 3, -1, 6, 5, 1, 2, -4, -1, 0, 0}; {4, -5, -1, 4, -1, 2, 0, -2 5, 0, 0}; {1, 3, 2, 6, 0, -5, -1, -1, 5, 3, 0, 0}; {-5, 2, 6, 3, 4, 6, -1, 0, -3, 6, 0, 0}; {6, -3, -2, 3, -3, 4, -3, -2, 6, 2, 0, 0}; {-4, 0, 2, -3, 3, 0, 4, 6, 3, 1, 0, 0}; {0, 0, 10, 1, 8, -1, 4, 5, 10, 10, 4, 1}; {-4, 2, 6, 3, 4, 6, -1, 0, -3, 6, 0, 0}; {3, -2, 3,2, -3, 2,4, 5, -5, 1, 0, 0}; {0, 0, 10, 2, 3, 8, 9, 10, 6, 1, 7, 0}; {2, -4, 0, -2, 6, 6, 1, -4, -2, 0, 0, 0}; {-1, -1, -3, 1, -5, 4, 1, -1, 5, -3, 0, 0}; {1, -4, 1, 0, 2, -2, 2, 5, -5, 4, 0, 0}; {4, -1, 4, 4, -1, 0, -4, 5, -2, 0, 0, 0}; {4, 0, 6, -5,4, -5, -1, 4, 3, -2, 0, 0}; {1, 6, -3, -4, 2, 6, 2, -1, -2, 2, 0, 0}; {3, -1, 5, -5, 6, -1, 2, 1, 0, 4, 0, 0}; {0, 5, -4, -4, 1, 6, 1, -2, -3, 2, 0, 0}; {0, 0, 10, 5, 5, 10, 3, 9, 10, 10, 2, 9); {5, 3, -1,4, 4, -1, 4, -5, 5, -2, 0, 0}; {3, 0, -5, 0, -5, -2, 1, 0, 3, 4, 0, 0}; {1, -1, -5, 2, -4, -3, -2, 4, -4, 0, 0, 0}; {0, 0, 10, 7, 3, 8, 3, 7, 6, 8, 11, 4}; {-3, 4, -3, 1, 5, 2, -1, 0, -2, -4, 0, 0}; {-3, 6, 1, -5, 1, 1, -1, 2, 5, -1, 0, 0}; 5, -3, -1, 1, -2, 5, 2, 3, 0, 4, 0, 0}; {-5, 4, -1, 6, -3, 6,

5, 3, -5, -2, 0, 0}; {1, 0, -3, -4, 1, 5, -2, 5, -2, -3, 0, 0}; {0, 0, 10, 11, 0, 2, 6, 10, 8, 3, 10, 3}; {-2, 4, -4, 3, -4, -5, -1, -1, 3, 3, 0, 0}; {-4, 2, -5, 2, -3, 6, 5, -2, 0, 2, 0, 0}; {-1, 6, 0, -4, -4, 2, 6, -4, -2, 1, 0, 0}; {0, 0, 11, 1, 3, 9, 8, 5, 1, 6, 0, 8}; {6, 1, -5, 4, 4, -1, 3, -5, -4, 0, 0, 0}; {-4, 2, -5, 3, 4, 6, 0, 0, -3, -5, 0, 0}; {0, 0, 11, 4, 1, 7, 8, 1, 3, 9, 0, 9}; {-1, 4, -4, -5, 1, 4, 2, -1, -3, 2, 0, 0}; {-1, 1, 2, -2, 2, -1, 3, -3, 6, 5, 0, 0}; {0, 0, 11, 6, 1, 0, 4, 7, 10, 5, 8, 4}; {-5, 2, -4, -2, 1, 3, -3, 5, 1, 1, 0, 0}; {-5, 3, -2, 1, -4, -1, 3, 3, -1, -2, 0, 0}; {-4, 4, -1, 3, -2, 1, 3, 2, 4, 5, 0, 0}; {3, -3, 2, 4, -3, 5, 3, 4, -1, -2, 0, 0}; {0, 0, 11, 7, 8, 4, 11, 10, 2, 2, 9, 2}; {5, 2, -2, 3, 1, 1, -4, -2, 5, -3, 0, 0}; {6, 3, -1, 5, -5, 3, 6, 5, 5, -2, 0, 0}; {1, -4, 2, 6, -4, 3, 1, 0, -2, -3, 0, 0}; {-5, 4, 0, -5, -5, 5, -5, 2, 5, -2, 0, 0}; {2, -1, -5, 2, 6, 3, 2, 2, -5, -2, 0, 0}; {0, 0, 11, 9, 4, 9, 3, 9, 3, 4, 8, 8}; {5, 1, -4, 2, -4, -1, 1, 0, 3, 4, 0, 0}; {6, 0, 5, -3, 5, 5, 5, 3, -3, -4, 0, 0}; {5, 1, 6, 0, -4, 5, 5, -3, 0, 1, 0, 0}; {2, -2, 5, 1, 2, -3, 1, 6, -4, -1,0, 0}; et {1, 4, 2, -3, -1, -2, - 3, 0, 5, 6, 0, 0}; et

{0, 0, 0, 0, 3, 6, 0, 10, 6, 3, 8, 1}; {0, 0, 1, 3, 3, 9, 6, 2, 4, 11, 2, 9}; {0, 0, 3, 0, 9, 4, 3, 3, 9, 1, 8, 0}; {0, 0, 3, 1, 10, 11, 8, 2, 6, 1, 2, 7}; 0, 0, 3, 1, 11, 6, 7, -1, 4, 11, 7, 11}; {0, 0, 3, 6, 10, 8, 8, 3, 11, 9, 0, 8}; {0, 0, 3, 7, 1, 4, 7, 6, 4, 0, 5, 2}; {0, 0, 4, 8, 8, 3, 9, 0, 7, 1, 10, 10}; {0, 0, 6, 5, 3, 5, 1, 5, 1, 8, 1, 2}; {0, 0, 6, 6, 1, 3, 4, 4, 5, 0, 6, 0}; {0, 0, 6, 8, 1, 3, 1, 4, 9, 5, 11, 8}; {0, 0, 7, 8, 8, 6, 2, 9, 6, 10, 3, 9}; {0, 0, 7, 8, 10, 9, 11, 2, 9, 1, 8, 4}; {0, 0, 8, 4, 4, 9, 3, 0, 5, 11, 2, 2}; {0, 0, 8, 5, 7, 10, 2, 10, 0, 11, 4, 11}; {0, 0, 8, 6, 9, 3, 11, 3, 4, 0, 4, 5}; {0, 0, 9, 1, 3, 9, 9, 9, 3, 0, 5, 0}; {0, 0, 10, 0, 7, 11, 7, 4, 11, 11, 2, 5}; {0, 0, 10, 11, 2, 7, 8, 2, 10, 2, 8, 4}; et {0, 0, 11, 6, 5, 0, 8, 1, 0, 4, 10, 1}; et

le mappage (S102) de la séquence $\{f_n\}$ sur N sous-porteuses pour générer et envoyer un premier signal.

2. Procédé de traitement de signal selon la revendication 1, dans lequel le mappage de la séquence $\{f_n\}$ sur N sous-porteuses comprend :

le mappage respectif des N éléments de la séquence $\{f_n\}$ sur N sous-porteuses consécutives ; ou
le mappage respectif des N éléments de la séquence $\{f_n\}$ sur N sous-porteuses équidistantes.

3. Procédé de traitement de signal basé sur une séquence, dans lequel le procédé de traitement de signal comprend :

la réception (S103) d'un premier signal porté sur N sous-porteuses, et l'obtention de N éléments dans une séquence $\{f_n\}$, dans lequel $f_n$ est un élément dans la séquence $\{f_n\}$, la séquence $\{f_n\}$ est une séquence respectant une condition prédéfinie, la condition prédéfinie est $f_n = A \cdot x_n \cdot e^{2\pi j \cdot \alpha n}$, une valeur de n est comprise dans une plage allant de 0 à N-1, A est un nombre complexe non nul, $\alpha$ est un nombre réel,

$$j = \sqrt{-1}$$

, pour un élément $X_n$, $x_n = u \cdot e^{2\pi j \cdot s_n / M}$, M=12, u est un nombre complexe non nul, et un ensemble qui est constitué d'une séquence $\{S_n\}$ constituée d'un élément $S_n$ comprend au moins une des séquences dans un premier ensemble de séquences, dans lequel
les séquences dans le premier ensemble de séquences comprennent tout ou partie des séquences suivantes :

{-2, 4, -2, 4, 0, 2, 2, 0, 5, 5, 0, 0}; {-1, 6, 1, -4, -2, 4, -5, -5, 6, -5, 0, 0}; {3, -3, 3, -3, 0, -2, -2, 0, -5, -5, 0, 0}; {2, -4, 2, -4, -2, -2, -1, -5, 6, 0, 0}; {-4, 2, -4, 3, -1, 1, 2, 1, 4, 5, 0, 0}; {0, 6, 0, -5, -2, -4, -3, -1, 6, 6, 0, 0}; {0, 6, 0, -5, -2, -3, -3, -1, 6, 6, 0, 0}; {-1,5, -1, 6, -2, 3, -3, 1, 5, 5, 0, 0}; {-4, 2, -4, 4, -4, -5, -4, -2, 5, 5, 0, 0}; {-5, 1, -5, 3, -5, 6, -5, -3, 5, 5, 0, 0}; {4, -2, 4, 0, -4, -1, 0, -1, 3, 4, 0, 0}; {0, 4, -4, 2, -3, -2, -3, 4, 1, -2, 0, 0}; {-1, 3, -5, 1, -4, -3, -3, 4, 1, -2, 0, 0}; {0, 5, -2, 5, 2, 4, 3, 1, -3, -4, 0, 0}; {-3, 1, 5, -1, -5, -4, -5, 3, 0, -3, 0, 0}; {3, -3, 3, -1, 0, 6, -3, -3, -5, -4, 0, 0}; {1, 6, -1, 6, 6, 0, 2, 0, -3, -1, 0, 0}; {5, -2, 3, -2, 0, -1, 0, 0, -5, 6, 0, 0}; {-3, 3, -3, 5, -4, -4, -4, -2, 5, 5, 0, 0}; {-3, 0, 3, -3, 3, 1, 3, -5, 4, 1, 0, 0}; {-1, 4, -3, 5, 4, -2, 1, 0, -3, 2, 0, 0}; {3, -1, -5, -5, 1, -4, 0, 1, 4, -1, 0, 0}; {2, -2, 6, 6, 1, -5, 0, 1, 4, -1, 0, 0}; {0, -5, 2, 2, -5, 1, 4, 4, 6, 1, 0, 0}; {1, -3, 5, 6, 0, -5, -1, 1, 3, -1, 0, 0}; {-3, 4, -1, -1, 5, -1, 3, 4, 5, 0, 0, 0}; {-5, 1, -5, 6, -1, 4, -5, -5, -5, 1, 0, 0}; {-2, 5, 0, 0, 6, 0, 3, 4, 5, 0, 0, 0}; {-5, 1, -5, 6, -1, 5, -5, 6, -5, 1, 0, 0}; {3, -3, 3, 3, -4, 2, 5, 5, 6, 0, 0, 0}; {-3, 3, -3, -3, 4, -2, -5, -5, 6, 0, 0, 0}; {4, -3, 2, 2, -4, 1, -2, -3, -5, 0, 0, 0}; {5, -1, 5, 6, 1, -5, 5, 6, 5, -1, 0, 0}; {5, -1, 5, 6, 1, -4, 5, 5, 5, -1, 0, 0}; {3, -4, 1, 1, -5, 1, -3, -4, -5, 0, 0, 0}; {-1, 3, -5, 6, 0, 5, 1, -1, -3, 1, 0, 0}; {0, 5, -2, -2, 5, -1, -4, -4, 6, -1, 0, 0}; {-2, 2, 6, 6, -1, 5, 0, 1, -4, 1, 0, 0}; -2, 2, 6, 6, 0, 5, 1, -1, -3, 1, 0, 0}; {-3, 1, 5, 5, -1, 4, 0, -2, -4, 1, 0, 0}; {-3, 1, 5, 5, -1, 4, 0, -1, -4, 1, 0, 0}; {-2, 3, -4, -3, 4, -2, -5, -5, 6, -1, 0, 0}; {3, 0, -3, 3, -3, -1, -3, 5, -4, -1, 0, 0}; {4, -2, 4, -4, 4, 5, 4, 2, -5, -5, 0, 0}; {-5, 2, -3, 2,

0, 1, 0, 0, 5, 6, 0, 0}; {-1, 5, -1, 3, 5, 1, 1, 6, 5, -1, 0, 0}; {0, -5, 2, -5, -2, -4, -3, -1, 3, 4, 0, 0}; {4, -2, 4, -3, 6, 6, 4, 3, -5, -5, 0, 0}; {2, -4, 2, -5, 4, 5, 3, 2, -5, -5, 0, 0}; {-3, 3, -3, 2, 0, -5, 4, 3, - 1, 0, 0, 0}; {0, 6, 0, 5, 3, 4, 3, 1, 6, 6, 0, 0}; {6, 0, 6, -1, 2, 0, -1, 0, -4, -5, 0, 0}; {-4, 4, 1, -4, -4, 0, 4, 0, 3, -1, 0, 0 {-1, 5, 0, 5, 3, 3, 2, 1, 6, -5, 0, 0}; {-3, 2, -4, 0, -2, -4, -5, 4, -4, -4, 0, 0}; {-1, 6, 2, -4, -2, -3, 4, -5, -1, 2, 0, 0}; {5, -2, 4, -3, 5, 6, 5, 3, -5, -5, 0, 0}; {-1, 5, 0, 6, -3, -4, -4, -2, 6, 6, 0, 0}; 1- - 5, 1, -4, 3, -5, 6, -5, -3, 5, 5, 0, 0}; { 5, -3, 2, -5, -3, 6, 3, -4, 6, 0, 0, 0}; {3, -5, 0, 5, -4, 5, 2, -5, 5, 0, 0, 0}; {0, 5, -1, 5, 5, -2, -2, 2, 2, 2, 0, 0}; {-5, 0, 6, 0, 2, 0, 0, 1, -4, -5, 0, 0}; {-4, 1, -5, 3, -5, 6, -4, -3, 5, 5, 0, 0}; {-3, 1, 6, 1, -5, -4, -4, 3, 1, -2, 0, 0}; {6, -3, 1, -5, 1, 0, 1, 6, 3, 0, 0, 0}; {-5, -1, 4, 0, 3, -3, -4, 2, 0, -2, 0, 0}; {5, 0, -4, -4, 2, -3, 1, 2, 4, --, 1, 0, 0};. {3, -2, 6, 6, 1, -4, 0, 1, 4, -1, 0, 0}; {-1, 5, 0, 0, 5, 0, 4, 4, 5, 0, 0, 0}; {5, -1, 6, 6, -1, -2, 4, 6, 2, 0, 0, 0}; {-1, 5, 0, 0, 6, 0, 3, 4, 5, 0, 0, 0}; {-1, 4, -2, -2, 4, -1, -4, -4, 6, -1, 0, 0}, {-5, -1, 4, 3, -3, 3, -1, -2, -4, 0, 0, 0}; {-3, 1, 6, 5, -1, 4, 0, -2, -3, 1, 0, 0}; {-2, 3, -3, -3, 4, -2, -5, -5, 6, -1, 0, 0}; {-5, -1, 4, 3, -2, 3, -1, -2, -4, 0, 0, 0}; {-4, 1, -5, -5, 3, -3, 6, 6, 6, -1, 0, 0}; {6, -2, 3, 2, -3, 2, -1, -3, -4, 0, 0, 0}; {3, 6, -2, -3, 3, -5, 3, 1, -2, 2, 0, 0}; {-5, -1, 4, 4, -3, 3, -1, -2, -4, 1, 0, 0}; {6, -2, 3, 3, -3, 3, -1, -2, -4, 0, 0, 0}; {5, -3, 2, 2, -4, 2, -2, -3, -5, 0, 0, 0}; {5, 1, -2, 4, -2, 0, -3, 6, -4, -1, 0, 0}; 3, -2, 6, -1, 4, 5, 1, -2, -2, 0, 0, 0}; {5, -1, -5, -1, 1, 3, -3, 3, 3, 1, 0, 0}; {4, 1, 0, -5, 1, 6, 2, 2, 5, -3, 0, 0}; {3, -1, -3, 3, -3, -1, 6, -4, -5, -1, 0, 0}; 1, -3, -5, 1, -5, -2, 6, -5, 6, -3, 0, 0}; {2, -5, 2, -5, 4, 5, 3, 2, -5, -5, 0, 0}; {-1, 3, -3, 1, 0, 4, 1, -5, 6, 2, 0, 0}; {-2, 2, -4, 0, -1, 3, 1, 6, 5, 3, 0, 0 {5, -1, -5, 2, -5, -1, 3, 5, 4, 4, 0, 0}; {5, -1, -5, 2, -5, -1, 3, 6, 5, 4, 0, 0}; {0, 4, -2, 3, 6, 4, 0, 6, 4, 0, 0, 0}; {-3, 3, -1, 6, -5, -2, -4, -2, 3, 3, 0, 0}; {-4, -1, 4, -3, -1, -5, 3, -4, 5, 0, 0, 0}; {-5, -2, 3, -4, -2, -5, 4, -4, 6, 0, 0, 0}; {0, 4, -2, 4, -2, -3, -1, -1, 4, 3, 0, 0}; {6, -3, 2, -5, 4, -5, -5, -3, 6, 3, 0, 0}; {6, -2, 4, -2, -4, 1, 0, 4, 4, 2, 0, 0}; {6, -2, 4, -2, -3, 2, 1, 5, 4, 2, 0, 0}; {4, -3, 4, 0, 0, 6, -5, -1, 1, -1, 0, 0}; {-1, 2, -5, 1, 0, 4, 3, 6, 5, 3, 0, 0}; {3, 5, -3, 2, 3, -1, 6, -1, -5, 1, 0, 0}; {-2, 1, 6, 0, -5, -4, -2, -2, 4, 2, 0, 0}; {-3, 2, -3, 6, -3, 3, 4, -1, -2, -3, 0, 0}; {1, 3, -5, 1, 2, -3, 4, -3, 5, 0, 0, 0}; {0, -2, 6, 0, 1, -3, 4, -3, 5, 0, 0, 0}; {-3, -1, 3, -2, 6, -2, -5, -3, -5, 5, 0, 0}; {0, 3, -4, -5, 1, 6, 1, 0, -3, 1, 0, 0}; {-4, 3, 0, 4, -4, -3, 4, 0, 0, - 1, 0, 0}; {-4, 4, 2, -5, 0, 3, -2, -5, -2, 0, 0, 0}; {-5, 3, 1, 6, -1, 2, -2, -5, -2, 0, 0, 0}; {5, 1, 0, 5, -2, 2, -3, 6, -2, 0, 0, 0}; {-4, 4, 3, -3, 3, -5, 4, 5, 5, -4 0, 0}; {4,

-1, -3, 3, -3, -1, -5, -4, 6, -2, 0, 0}; {-1, 5, 2, -4, -4, 1, 5, -1, 1, 0, 0}; {-3, 3, 0, 6, -5, -1, -5, -2, 3, 2, 0, 0}; {2, 6, 1, 6, 6, -1, -2, 4, 3, 1, 0, 0}; {-1, 2, -4, 0, 0, 4, 2, -5, 5, 2, 0, 0}; {-2, 4, 1, -4, 3, -5, - 1, 4, 4, 3, 0, 0}; {-5, -1, 6, -1, 3, 1, 2, 5, 4, 2, 0, 0}; {4, -4, 3, -4, -5, 0, -1, 4, 4, 1, 0, 0}; {4, -4, 3, -4, -5, 0, -1, 4, 4, -2, 0, 0}; {2, 5, -1, 3, 1, 5, 3, -4, 6, 3, 0, 0}; 1, 4, -2, 3, 1, 5, 3, -5, 6, 3, 0, 0}; {3, -4, 4, -1, -1, 5, 6, -1, 1, -1, 0, 0}; {-2, 1, -5, 0, -1, 3, 2, 6, 5, 3, 0, 0}; {-2, 4, 1, -3, 3, -5, 0, 3, 3, 3, 0, 0}; {6, -2, 5, -1, 5, 5, -4, -4, 5, 5, 0, 0}; {5, -3, 4, -2, 5, 5, -5, -4, 5, 5, 0, 0}; {5, -2, 6, 1, 0, 6, -5, 0, -2, 0, 0, 0}; {1, 4, -2, 3, 0, 4, 4, -4, 6, 3, 0, 0}; {0, 2, -5, 0, 1, -3, 4, -3, 5, 0, 0, 0}; {-2, 0, 5, -2, 0, -4, 4, -3 , 6, 0, 0, 0}; {5, -5, 0, 6, 3, --5, 5, -4, 6, 5, 0, 0}; {-5, -2, 4, -1, 5, -4, -5, 3, 0, -2, 0, 0};. {-3, -1, 4, 2, 4, -1, 6, 1, 0, 4, 0, 0}; {5, -5, 1, -1, 2, -3, 4, -1, -1, 3, 0, 0}; {-2, -5, -4, 2, -3, 2, 0, 2, 3, -5, 0, 0}; {0, -5, 6, -1, 3, 6, -1, 0, 0}; {5, 0, -1, 5, 5, -3, 3, -2, 1, 0, 0, 0}; {1, -4, -5, 1, 3, -5, -1, 0, 0}; {-5, 2, 1, -5, -2, 3, 3, 6, -2, 0, 0, 0}; {0, 6, 4, -2, -4, 1, 5, -1, 1, 1, 1, 0, 0}; {-1, 4, 1, -5, -3, 3, 4, -1, 0, 2, 0, 0}; {-2, 4, 2, -3, 1, 5, 4, 5, -1, 2, 0, 0}; {-3, -1, 5, -2, -1, -5, 3, -4, 5, -1, 0, 0}; {-5, -3, 3, -4, -2, 6, 1, -5, 4, -1, 0, 0}; {6, -5, 0, 4, 5, 0, -5, -1, -5, 1, 0, 0}; {0, 4, 0, -5, -1, 4, 5, 1, -1, -3, 0, 0}; {2, -3, -3, 3, 5, 1, -4, 1, -2, -1, 0, 0}; {-3, 3, 2, -4,-3, 5, -1, 3, 0, 0, 0, 0}; {-4, 2, 1, -5, -4, 4, -2, 2, 0, 0, 0, 0}; {-3, -1, 6, -2, 5, -1, -4, 5, 0, 0}; {1, -4, -4, 3, 2, 6, 0, -3, 0, -1, 0, 0}; {-1, 5, 4, -2, -4, 0, 5, 0, 2, 1, 0, 0}; {0, -5, -5, -2, 1, 6, 0, -4, -1, -1, 0, 0}; {-1, 6, 6, 1, 1, 6, 0, -4, -1, -1, 0, 0}; {-4, 2, 1, -5, 6, -1, 3, -2, 1, 0, 0, 0}; {-3, 4, 4, -1, -1, 5, -2, 6, -2, -2, 0, 0}; {-4, 3, 3, -2, 4, 6, -2, -1, 0, 0}; {-4, 3, 3, -2, -1, 4, -2, -5, -1, -1, 0, 0}; {-5, 1, 0, 6, 6, -2, 4, -1, 1, 0, 0, 0}; {-4, 3, 3, -2, -1, 4, -1, -5, -1, 1, 0, 0}; {3, 5, 0, 3, --4, 4, 2, -5, 5, -1, 0, 0}; {-3, 3, 2, -3, 6, -3, 3, 0, 1, -1, 0, 0}; {1, 4, 0, -5, -1, 4, 5, 1, -1, -4, 0, 0}; {-3, -2, 4, -2, -1, -5, 2, -5, 4, -1, 0, 0}; {-4, 2, 2, -5, -3, 4, -2, 3, 0, 0, 0, 0}; {5, -3, -5, -1, -3, 4, -4, -3, 5, 4, 0, 0}; {-5, 3, 5, 1, 3, -4, 4, 3, -5, -4, 0, 0}; {6, 0, 0, 6, 5, 3, -2, 2, -1, 0, 0, 0}; {6, 0, 0, 6, -5, 3, -2, 3, -1, 0, 0, 0}; {-4, 2, 2, -4, 6, -2, 4, -1, 1, 1, 0, 0}; {-5, 1, 1, -5, 5, -3, 3, -2, 1, 1, 0, 0}; {6, 0, 0, 6, 5, -3, 2, -2, 1, 0, 0, 0}; {6, 0, 0, 6, 5, -3, 3, -2, 1, 0, 0, 0}; {4, -2, -2, 5, 3, -4, 2, -3, 0, 0, 0, 0}; {6, 3, -5, 2, -4, 6, 5, 3, 6, -5, 0, 0}; {-3, -5, 0, -3, 4, -4, -2, 5, -5, 1, 0, 0}; {-4, 3, 5, -1, -5, 2, 6, -5, 0, 0, 0, 0}, {4, -2, -1, 5, 4, -4, 2, -2, 0, 0, 0, 0}; {-1, 4, 4, -3, -2, 6, 0, 3, 0, 1, 0, 0}; {0, -5, -3, 4, -4, 5, 1, -5, -5, -2, 0, 0}; {5, -2, -2, 3, 0, 4, -4, 3, 1, 2, 0, 0}; {0, 6, -5, 2, 0, 5, 0, -4, -1, 0, 0, 0}; {-2, 3, 3, -3, -5, -1, 4, -1, 2,

1, 0, 0}; {3, -4, -4, 2, -2, 1, -5, 3, 1, 1, 0, 0}; {2, -4, -3, 4, 1, 6, 1, -3, -1, 0, 0, 0}; {0, 4, 3, -4, 3, 6, -1, 6, 4, 2, 0, 0}; {-5, 5, -1, 1, -2, 3, -4, 1, 1, -3, 0, 0}; {-1, -3, 3, -4, 6, 3, -2, 0, -5, -1, 0, 0}; {-4, 4, -4, 1, -5, -4, 6, 4, -5, -5, 0, 0}; {6, 5, 0, 4, -5, 0, 5, 1, 5, 1, 0, 0}; {5, 3, -3, 4, 2, 6, -1, 5, -4, 1, 0, 0}; {3, 1,---5,2, 1, 5, -3, 4, -5, 1, 0, 0}; {4, -1, 2, -5, 0, -1, -3, -5, -4, -3, 0, 0}; {3, -2, 1, -5, 1, -2, -4, 6, -5, -3, 0, 0}; {-4, 1, 2, -5, -4, 4, -2, 5, 0, 1, 0, 0}; {2, -4, -2, 4, 0, 5, -3, -3, 1, -1, 0, 0}; {5, -2, -1, 5, 2, -3, 3, 6, 2, 0, 0, 0}; {2, 5, 4, -2, 3, -2, 0, -2, -3, 5, 0, 0}; {-5, -1, 0, -5, 2, -2, 3, 6, 2, 0, 0, 0}; {3, 1, -4, -2, -4, 1, 6, -1, 0, -4, 0, 0}; {2, -1, 5, -2, --5, 5, 0, 1, -4, -1, 0, 0}; {2, 0, -5, 2, 0, 4, -4, 3, 6, 0, 0, 0}; {0, -2, 5, 0, -1, 3, -4, 3, -5, 0, 0, 0}; {4, -1, 3, -4, 2, -1, -4, 6, -5, -4, 0, 0}; {2, -4, -1, 3, -3, 5, -3, -3, -3, 0, 0}; {4, -2, 1, 6, 0, -1, -3, -5, -4, -3, 0, 0}; {-1, 5, -4, 1, -5, 3, -1, -4, -4, -3, 0, 0}; {-2, 4, -5, 0, 6, 2, -1, -4, 4, -3, 0, 0}; {3, -3, 0, 6, 5, 1, 5, 2, --3, -2, 0, 0}; {5, 2, -4, 5, 1, 5, -4, 4, 6, 0, 0, 0}; {3, 3, 0, 1, -5, 0, 6, 2, -4, -4, 0, 0}; {4, -4, -3, 3, -3, 5, -4, -5, -5, 4, 0, 0}; {-1, 3, 5, -1, 5, -2, 6, 5, 6, 3, 0, 0}; {-3, 1, 3, -3, 3, 1, 6, 4, 5, 1, 0, 0}; {-4, -1, 0, 5, -1, 6, -2, -2, -5, 3, 0, 0 {-5, -1, 1, -4, 2, 1, 3, 6, 4, 1, 0, 0}; {5, -3, -1, 6, 1, -2, 2, 5, 2, 0, 0, 0}; {4, -4, -2, 5, 0, -3, 2, 5, 2, 0, 0, 0}; {4, -3, 0, -4, 4, 3, -4, 0, 0, 1, 0, 0}; {4, -2, 2, -1, -1, 6, -1, -3, -5, -4, 0, 0}; {0, -3, 4, 5, -1, 6, -1, 0, 3, -1, 0, 0}; {0, -2, 6, 0, -1, 3, -4, 3, -5, 0, 0, 0}; {-1, -3, 5, -1, -2, 3, -4, 3, -5, 0, 0, 0}; {-5, 2, -5, -1, 6, -5, 6, 4, -5, -5, 0, 0}; {-5, 3, -3, 2, 0, 1, 0, 4, 5, 0, 0}; {-3, -5, 3, -2, -3, 1, 6, 1, 5, -1, 0, 0}; {-3, 5, -1, 5, -1, 1, 2, 1, 4, 5, 0, 0}; {-4, 4, -2, 4, -2, 1, 2, 1, 4, 5, 0, 0}; {-5, 3, -3, 3, -2, 0, 1, 0, 4, 5, 0, 0}; {4, -1, 4, -3, 4, 5, 5, 3, 6, 6, 0, 0}; {1, -4, 1, 6, 1, 2, 6, 5, 1, -1, 0, 0}; {2, -3, 2, -5, 3, 4, 4, 2, 6, 6, 0, 0}; {5, 2, -3, 4, 2, 5, -4, 4, 6, 0, 0, 0}; {4, 1, -4, 3, 1, 5, -3, 4, -5, 0, 0, 0}; {-5, 3, -3, 5, 3, -5, -3, 4, 6, 0, 0, 0}; {-2, 6, 0, -4, 4, -5, -2, 5, -5, 0, 0, 0}; {3, -2, 3, -1, 0, 6, -2, -3, -5, -4, 0, 0}; {0, -5, 0, -4, 1, 3, 2, 1, 5, 5, 0, 0}; {-1, 6, 0, -4, 3, 2, 2, -4, -1, 2, 0, 0}; {6, 1, -5, 3, -5, 6, -5, -2, 3, 4, 0, 0}; {-1, 5, -2, 6, -1, 2, 2, 0, 4, 4, 0, 0}; {-3, 2, 6, 1, -4, -5,-1, 2, 2, 0, 0, 0}; {-5, -1, 2, -4, 2, 0, 3, 6, 4, 1, 0, 0}; {5, -1 , 4, 1, -2, -3, 3, -4, -2, -1, 0, 0}; {0, -4, 3, 3, -4, -4, 0, 4, 0, 1, 0, 0}; {-5, 3, -2, -2, 4, -2, 2, 3, 5, 0, 0, 0}; 6, 2, -3, -3, 3, -3, 1, 2, 4, 0, 0, 0}; {5, 1, -4, -4, 3, -3, 1, 2, 4, -1, 0, 0}; {6, 2, -3, -2, 3, -2, 1, 3, 4, 0, 0, 0}; {4, -1, 5, 5, -3, 3, 6, 6, 6, 1, 0, 0}; {5, 1, -4, -3, 2, -3, 1, 2, 4, 0, 0, 0}; {5, 1, -4, -3, 3, -3, 1, 2, 4, 0, 0, 0}; 2, -3, 3, 3, -4, 2, 5, 5, 6, 1, 0, 0}; {1, -4, 2, 2, -4, 1, 4, 4, 6, 1, 0, 0}; {1, -5, 0, 0, 6, 0, -3, -4, -5, 0, 0, 0};

{-5, 1, 6, 6, 1, 2, -4, 6, -2, 0, 0, 0}, {1, -5, 0, 0, -5, 0, -4, -4, -5, 0, 0, 0}; {-3, 2, 6, 6, 1, 4, 0, -1, -4, 1, 0, 0}; {-5, 0, 4, 4, -2, 3, -1, -2, -4, 0, 0, 0}; {6, -1, 3, 3, -2, 3, -1, -3, -4, 1, 0, 0}; {-1, -3, 6, 0, 3, -1, 2, 3, 3, -4, 0, 0}; {6, 3, -1, 5, -1, 0, -1, 6, -3, 0, 0, 0}; {6, 2, -3, 2, -4, -1, 3, 4, -1, -1, 0, 0}; {3, -2, 4, -4, 3, 4, 5, 3, 6, 6, 0, 0}; {4, -1, 5, -3, 5, 6, 4, 3, -5, -5, 0, 0}; {1, -4, 2, 6, 2, 3, 4, 2, 6, 6, 0, 0}; {1, -4, 2, -5, 3, 4, 3, 2, 6, 6, 0, 0}; {-2, 5, -1, 4, 1, 2, 2, 1, 5, 6, 0, 0}; 5, -1, 4, -3, 5, 6, 5, 3, -5, -5, 0, 0}; {-5, 3, -2, 5, 3, 6, -3, 4, 6, 0, 0, 0}; {-3, 4, -2, 4, -1, 1, 2, 1, 4, 5, 0, 0}; {-5, 2, -4, 2, -2, 0, 1, 0, 4, 5, 0, 0}; {-3, 5, 0, -5, 4, -5, -2, 5, -5, 0, 0, 0}; {6, 0, 5, -1, -5, -5, 5, 4, -4, -4, 0, 0}; {2, -4, 1, -5, 3, 4, 4, 2, 6, 6, 0, 0}; {2, -4, 1, -5, 4, 4, 4, 2, 6, - 5, 0, 0}; {-1, 6, 0, - 5, -2, -4, -3, -1, 5, 5, 0, 0}; {-1, 6, 0, -5, -2, -3, -3, -1, 5, 5, 0, 0}; {-4, 3, -3, 4, -4, -5, -4, -2, 5, 5, 0, 0}; {-5, 2, -4, 3, -5, 6, -5, -3, 5, 5, 0, 0}; {-5, 2, 4, 3, -4, -5, -5, -1, 2, 4, 0, 0}; et {-2, 5, - 1, 6, -1, 2, 3, 1, 4, 5, 0, 0};

{-3, 2, -5, 0, -1, -3, -5, 5, -3, -4, 0, 0}; {6, 0, 6, 0, -4, 2, 0, -2, 0, 0}; {0, 0, 0, 1, 10, 8, 5, 0, 4, 9, 10, 2}; {1, -5, 1, -3, -5, -1, -1, 6, -5, 1, 0, 0}; {-4, 1, 6, 1, -2, 6, 0, 2, 4, 3, 0, 0}; -{-3, 1, 5, 0, -5, -3, -4, 3, 0, -2, 0, 0}; {4, 5, 6, -2, 3, -1, 4, -1, -2, 4, 0, 0}; {-4, -1, 2, -4, 6, -2, -4, 5, -4, 3, 0, 0}; {-2, 3, -4, 4, 5, 6, 1, 1, -3, -5, 0, 0}; {0, 0, 0, 4, 8, 11, 9, 6, 10, 5, 0, 11}; {2, -4, 2, 1, 6, 4, -5, -1, 3, 1, 0, 0}; {5, 3, 1, 5, 1, 3, -2, 5, 6, -3, 0, 0}; {4, 6, -4, 4, -3, 6, 0, 6, 6, 3, 0, 0}; {-4, 0, 4, 3, -2, 3, -1, -2, -5, 0, 0, 0}; {-5, -5, -5, 2, 6, -2, 6, 4, -3, 6, 0, 0}; {-2, -4, 6, 0, 5, -3, -5, 3, -4, -1, 0, 0}; {1, -2, -5, 0, 5, 0, 3, 2, 4, 6, 0, 0}; {2, - 3, 4, -4, 5, 6, -1, -1, 3, 5, 0, 0}; {4, 0, -4, 2, 1, 4, -4, 3, 5, 0, 0, 0}; {3, -2, 5, -2, 0, -2, -3, 3, 3, -2, 0, 0}; {5, -1, 5, -2, 0, 0, -1, 0, -4, 6, 0, 0}; {6, 1, -3, 3, -4, 0, 4, 6, 6, 5, 0, 0}; {6, 0, -5, 1, 0, 2, 0, 0, 5, 5, 0, 0}; {-1, 6, 2, -2, 3, -4, 0, 3, 3, 3, 0, 0}; {-1, 5, 0, - 5, 3, 2, 2, -5, -2, 1, 0, 0}; {1, 6, 0, -5, 4, -2, 0, 3, 3, 3, 0, 0}; {0, 0, 1, 3, 11, 7, 11, 4, 5, 0, 0, 7}; {6, -3, 1, -5, -2, -5, 3, -4, 6, 1, 0, 0}; {0, 2, 5, -2, 5, 3, 3, -3, 4, 0, 0, 0}; {-4, 1, -5, 4, -4, -5, -4, -2, 5, 4, 0, 0}; {2, 4, -5, 1, 5, 0, -5, 5, 3, -1, 0, 0}; {0, 0, 1, 5, 9, 2, 10, 3, 0, 8, 4, 4}; {-2, -1, 1, -5, 3, 6, 2, 0, -1, 6, 0, 0}; {0, 0, 1, 6, 3, -1, 4, 6, 1, 5, 0, 0}; {-5, 1, -4, -5, -1, 5, -5, -5, -4, 2, 0, 0}; {1, -5, 2, 1, 5, 0, 1, -3, -5, -4, 0, 0}; {-4, 0, 5, 2, -3, -4, 4, -2, 1, 1,0, 0}; {0, 0, 1, 6, 11, 3, 10, 7, 4, 11, 2, 1}; {5, -1, 6, 6, 5, 2, -5, 4, 6, -4, 0, 0}; {-2, -5, 5, -4, 4, 6, 1, 6, -4, -4, 0, 0}; {-4, 3, -1, 0, 6, 6, -1, 3, -1, -1, 0, 0}; {0, 0, 1, 9, 0, 1, 6, 1, 8, 8, 5, 0}; {0, 0, 1, 9, 2, 5, 4, 8, 5, 1, 0, 6}; {-1, -5, 4, -4, 3, 5, 0, 6, -5, -1, 0, 0}; {0, 0, 1, 10, 1, 8, 11, 3, 2, 8, 7, 2}; {2, -4, 3, -5, -5, 5, -2, 0, 4, 4, 0, 0}; {2, -4, 3, -5, -5, 5, -1, 0, 3, 4, 0, 0}; 0, 0, 2, 0, 8, 9, 6, 10, 3, 9, 9, 2}; {-3, 1, -5, -2, -2, 3, -1, 6, 5, 1, 0, 0}; {3, -4, 3, -4, 5, 5, 2, 2, -4, -3, 0, 0}; {-1, 0, 3, 4, -1, -5, 2, -5, 2, 3, 0., 0}; {-5, 0, -5, 1, 3, -4, -4, 2, 1, 0, 0, 0}; {4, -5, 0, 4, 2, 6, 3, -4, 6, 4, 0, 0}; {0, 4, -2, 4, -3, -4, -1, -2, 6, 5, 0, 0}; {5, -4, 1, 6, 1, -1, 1, 0, 6, 3, 0, 0}; {-1, 6, 3, 1, 6, -1, -2, 0, -5, -1, 0, 0}; {3, 6, -1, 5, 0, -2, 0, -2, -4, -5, 0, 0}; {3, -3, 5, 2, 2, -3, 1, -5, -3, -1, 0, 0}; {4, -5, 0, -5, -4, 0, 2, 1, 5, 1, 0, 0}; {-3, 0, 5, 0, -5, -3, -5, 3, 0, -2, 0, 0}; {0, 0, 2, 7, 6, 4, 11, 8, 5, 9, 4, 7}; {-3, 0, 5, 2, -5, 3, -1, -2, 2, 2, 0, 0}; {-1, -1, 1, -4, 6, -3, 3, -2, -1, 5, 0, 0}; {3, 6, -1, -2, 3, -5, 3, 1, -2, 2, 0, 0}; {3, -1, -3, 1, 2, 5, 3, -5, 1, 4, 0, 0}; {0, 0, 2, 10, 4, 0, 11, 9, 6, 0, 3, 5}; {4, -2, 6, -3, -4, 6, 1, 0, 3, 6, 0, 0}; {-1, 0, 3, 1, 0, -5, -2, 5, 1, 6, 0, 0}; {0, 0, 2, 11, 10, 4, 6, 9, 3, 8, 2, 9}; {0, 0, 2, 11, 11, 5, 6, 2, 5, 10, 6, 1}; {-5, -2, 4, 4, -2, 3, 0, -2, -4, 0, 0, 0}; {6, 6, -3, -5, 3, -2, 2, -4, 3, 5, 0, 0}; {0, -4, -5, 1, -5, -2, 5, 4, 5, -1, 0, 0}; {-4, 4, 3, -2, 1, 5, - 1, -4, -1, -2, 0, 0}; {2, -5, 3, -4, 3, 3, 6, -5, 4, 5, 0, 0}; {0, 0, 3, 3, 7, 1, 5, 3, 1, 11, 7, 11}; {0, 0, 3, 3, 11, 8, 5, 7, 3, 6, 11, 4}; {1, 6, 2, -4, -2, 0, -2, -1, 4, 3, 0, 0}; {0, 0, 3, 4, 11, 1, 7, 10, 5, 11, 6, 3}; {2, -2, -3, -5, 0, 5, -4, -4, 1, -3, 0, 0}; {-3, 5, 4, 3, -3, 2, 5, -5, 0, -3, 0, 0}; {0, 0, 3, 6, 5, 2, 7, 4, 3, 1, 7, 0}; {-3, 1, -4, 3, 6, -2, -3, 5, 1, -1, 0, 0}; {-1, 2, -4, 2, -4, 6, 1, 2, -2, -2, 0, 0}; {-1, 2, -4, 2, -4, -4, -1, -2, 4, 2, 0, 0}; {0, 0, 3, 8, 2, 2, 9, 7, 6, 2, 6, 3}; {0, 0, 3, 8, 10, 7, 4, 3, 8, 4, 8, 6}; {3, 2, 4, -3, 6, -1, 5, 0, 1, 5, 0, 0}; {2, 1, 3, -4, 5, -2, 5, 0, 1, 5, 0, 0}; {-5, 3, 2, 5, 3, 0, 4, -3, 5, 4, 0, 0}; {--3.0, 6, 5, 0, 2, -4, 4, -1, -1, 0, 0}; {0, 0, 4, 0, 6, 1, 9, 7, 6, 2, 5, 8}; {-2, 1, -4, -4, 4, -4, 3, -1, -4, -2, 0, 0}; {0, 0, 4, 1, 8, 3, 5, 3, 2, 9, 11, 4}; {5, 1, 1, 6, -1, 2, -2, -5, -3, -3, 0, 0}; {-5, 4, 5, -1, 6, -5, 1, 5, 5, -2, 0, 0}; {6, 3, 4, 0, 6, 4, -2, 4, 6, -2, 0, 0}; {-5, 6, -3, -5, 3, -1, 2, -2, 3, 6, 0, 0}; {-2, 2, -2, 1, 5, -2, -2, 6, 4, -1, 0, 0}; {-5, -1, -5, -2, 4, -1, -4, 4, 5, 6, 0, 0}; {6, 6, -2, -3, 4, -2, 5, 3, 3, 3, 0, 0}; {3, 3, -5, -5, 1, -3, 3, -4, 2, 3, 0, 0}; {1, 4, -1, 4, -3, -3, 0, -2, 6, 2, 0, 0}; {6, 1, 0, -2, 3, -5, -2, -3, 2, -2, 0, 0}; {3, -5, 3, -1, -5, 6, 2, 5, -2, 0, 0, 0}; {0, 1, 6, -1, 6, 3, 4, -1, -2, 2, 0, 0}; {0, 0, 4, 8, 6, 2, 2, 11, 3, 4, 0, 5}; {-1, 6, 5, 4, -2, 1, -2, 0, 1, -4, 0, 0}; {6, -4, 2, -4, -1, 4, 1, -5, 3, 0, 0, 0}; {0, 4, 0, -4, 2, -2, -2, 6, -4, 0, 0, 0}; {0, 0, 4, 8, 10, 3, 11, 4, 2, 2, 11, 6}; {-3, 1, -3, 6, -4, 6, 5, -1, -5, -4, 0, 0}; {1, 3, -3, 4, 6, -3, 2, 0, 5, 1, 0, 0}; {0, 0, 4, 10, 2, 4, 7, 6, 10, 7, 5, 3}; {1, 4, -1, -3, -1, -4, 5, -2, -2, -5, 0, 0}; {0, 0, 4, 11, 11, 0, 11, 9, 3, 5, 2, 8}; {5, 1, 2, 6, 0, 2, -2, 6, -3, -4, 0, 0}; {3, -3, -4, -1, 3, -2, -5, -5,

-1, 4, 0, 0}; 0, 0, 5, 2, 1, 2, 1, 9, 6, 10, 3, 8}; {0, 0, 5, 2, 1, 5, 2, 5, 0, 10, 0, 7}; {2, -4, -5, -1, 2, -4, -4, 4, -1, 1, 0, 0}; 5, 2, 4, -1, 5, 6, 1, 5, 5, -3, 0, 0}; {5, 0, 0, 5, -4, 3, 5, 1, -3, 0, 0, 0}; {0, -3, -1, -5, 2, -3., -4, 3, -5, -2, 0, 0; {0, -4, -3, 4, -2, -5, 1, 6, -5, -1, 0, 0}; {-3, -5, -2, -4, 4, -4, 1, 6, -4, 6, 0, 0}; {3, 6, 2, 5, -5, 2, -2, 5, 5, 5, 0, 0}; {2, -4, -5, 1, 1, -5, 2, 6, 1, 1, 0, 0}; {-4, 2, 1, -4, -2, 3, -3, 6, -2, 0, 0, 0}; {-5, 4, 6, 4, -3, 0, -4, 2, 2, -4, 0, 0}; {-3, 1, 6, -3, 1, 0, 4, 2, -5, 3, 0, 0}; {-1, 4, 2, -3, -4, 0, 6, ~2, 2, 0, 0, 0}; {-1, 0, 6, -3, 6, -2, 6, -1, -4, 6, 0, 0}; {-3, -1, 6, -2, 3, 1, 0, 5, 3, -2, 0, 0}; {-4, -1, -5, 1, 0, 5, 0, 3, 5, 4, 0, 0}; {0, -1, 3, 5, 4, -1, 4, 5, 0, 4, 0, 0}; {-1, -1, 4, -5, -4, 3, -2, 1, -3, 2, 0, 0}; {2, -4, -4, -1, 2, -3, -4, 4, -1, 2, 0, 0}; {-3, -5, -1, -5, 4, 3, -3, -1, 5, -2, 0, 0}; {-3, 1, -1, 1, 5, 1, -3, 5, 3, 4, 0, 0}; {-2, -3, 2, -1, 3, 4, -3, 2, 5, 2, 0, 0}; {-4, -5, 0 -2, -4, -3, 3, 6, 2, -5, 0, 0};{0, 0, 6, 5, 8, 6, 6, 8, 1, 6, 11, 7}; {-5, 5, -3, 6, -4, 1, -3, 1, 4, 6, 0, 0}; {-4, 1, 0, 5, 1, 4, -2, 4, 4, 1, 0, 0}; {6, -3, 6, -3, 3, 6, -5, -1, -5, 4, 0, 0}; {4, 2, 6, 4, 6, 0, -4, 0, 3, 6, 0, 0}; {-4, 2, 2, -4, 6, -1, 4, -1, 0, 0, 0, 0}; {-4, 6, -2, -3, 1, -5, 0, 3, 6, 3, 0, 0}; {0, 0, 6, 7, 5, 5, 0, 4, 6, 3, 10, 4}; {-4, -1, -4, 1, -3, 2, 3, -3, 4, 3, 0, 0}; {4, -5, 4, -3, 2, 4, -2, -4, 4, 0, 0, 0}; {-2, 4, 4, 1, -2, 3, 4, -4, 1, -2, 0, 0}; {4, -5, 4, -2, -2, 3, -2, 1, 4, 3, 0, 0}; {0, 0, 6, 9, 6, 10, 5, 9, 8, 1, 11, 9}; {0, 0, 6, 9, 11, 3, 11, 3, 0, 1, 9, 4}; {0, 0, 6, 10, 2, 1, 4, 0, 8, 8, 11, 8}; {-2, -3, 2, 6, 1, -5, -3, 3, 1, -2, 0, 0}; {6, 4, -3, 2, -2, 5, 5, -2, 0, 3, 0, 0}; {4, 2, -5, 0, -3, 6, 0, 2, -4, 0, 0, 0}; {3, 0, 4, -2, 0, 6, 0, -3, -5, -3, 0, 0}; {0, 0, 7, 5, 0, 9, 2, 9, 3, 6, 4, 5}; {-3, 5, -4, 2, 2, -2, 2, -1, -4, -3. 0, 0}; {-2, -3, 3, 1, -4, -3, 4, -4, 2, -2, 0, 0}; {-1, 6, -4, 2, -5, 3, 0, -4, -3, -2, 0, 0}; {-3, 2, 2, 6, -1, -5, 3, 3, 0, 3, 0, 0}; 0, 0, 7, 6, 9, 3, 3, 1, 3, 5, 1, 5}; {-3, -5, 0, -2, 2, 4, -3, 2, 5, 2, 0, 0}; {1, -3, 0, -4, 1, -2, -4, 4, 5, -3, 0, 0}; {-3, 6, -2, -5, -4, 2, -2, 1, 4, 6, 0, 0}; {0, 0, 7, 8, 2, 1, 9, 4, 9, 7, 8, 10}; {0, 3, 1, 5, -2, 3, 4, -3, 5, 2, 0, 0}; {-2, 4, 5, 1, -2, 4, 4, -4, 1, -1, 0, 0); {-5, 0, 0, -5, 4, -3, -5, -1, 3, 0, 0, 0}; {4, -1, 1, -2, 6, -3, -5, -1, -1, -5, 0, 0}; {-4, 0, -1, 6, 0, 1, -5, 3, 5, 1, 0, 0}; {0, 0, 7, 11, 5, 3, 6, 3, 0, 0, 4, 3}; {0,0, -5, -1, 6, -4, 1, -3, 6, -1, 0, 0}; {0, 0, 7, 11, 10, 11, 4, 3, 7, 0, 8, 8}; {-4, 5, -2, 0, 6, -4, 5, 2, -3, 0, 0, 0}; {0, 4, 4, 2, 2, -3, -1, 4, -2, -5, 0, 0}; {0, 0, 8, 3, 3, 2, 4, 10, 2, 0, 8, 0}; {2, 1, -4, 2, 3, -3, 3, 6, 4, -2, 0, 0}; {4, 2, -4, 2, 5, 1, 6, 5, 5, 6, 0, 0}; {1, -3, 1, 6, 6, -3, 1, 0, -2, 3, 0, 0}; {2, -1, 4, -1, 6, 5, 1, 2, -4, -1, 0, 0}; {4, 2, -4, 4, 1, 5, -4, 4, 6, 0, 0, 0}; {1, -3, 1, -4, 0, -3, -3, 0, 6, 6, 0, 0}; {-3, 5, -3, 4, -2, -4, 6, 4, -5, -4, 0, 0}; {-2, -5, 0, -4, 6, 5, -4, -1, 5, -3, 0, 0}; {0, 0, 8, 8, 0, 10, 8, 2, 7, 2, 9, 0}; {3, - 3, -1, 5, 5, 1, 5, 1, -3, -1, 0, 0}; {-4, -5, 2, 1, 6, --3, 3, -3, 1, -1, 0, 0}; {0, 0, 8, 8, 2, 8, 3, 10, 2, 0, 2, 4}; {6, -2, -2, 2, 3, -2, 3, -3, 3, 2, 0, 0}; {-5, 6, 1, 0, 2, -1, 4, -1, 2, -5, 0, 0}; {-2, 1, 0, 3, -3, -1, 5, -2, -5, 4, 0, 0}; {-3, 1, 1, 6, 3, -1, 4, 6, 3, 2, 0, 0}; {6, -1, 0, 6, 5, -4, 2, -3, 1, 0, 0, 0}; {-3, 3, 5, 0, -4, 1, -2, -4, -3, -4, 0, 0}; {-4 0, 0, 6, 0, -5, -2, -4, -4, 5, 0, 0}; {0, 0, 8, 10, 0, 7, 2, 0, 4, 8, 6, 9}; {4, 1, 6, 5, -3, 5, -2, 2, 5, 2, 0, 0}; {0, 0, 8, 11, 9, 4, 11, 2, 6, 5, 5, 10}; {0, 0, 9, 0, 5, 10, 10, 10, 3, 11, 3, 3}, {--4, 6, 1, 2, -4, 4, -3, -1, 2, -1, 0, 0}; {-1, 5, -4, 6, 1, 6, 4, -4, -3, 3, 0, 0}; {0, 0, 9, 2, 3, 1, 9, 1, 10, 5, 6, 9}; {3, 3, 0, 5, -5, 4, -3, 2, 1, 6, 0, 0}; {-5, 2, 6, -5, -4, -2, 4, -3, 5, 3, 0, 0}; {0, 0, 9, 3, 10, 3, 4, 1, 4, 9, 10, 1}; {-5, 4, -2, 2, -3, -1, 3, 3, -1, -2, 0, 0}; {-2, -3, 5, -1, -2, 3, -4, 3, -5, 0, 0, 0}; {6, 5, 1, -5, -5, 0, 5, 1, 6, -1, 0, 0}; {5, 4, 0, -5, 3, -4, 2, 5, -4, 0, 0, 0}; {-1, 6, -2, 1, -3, -2, -5, 4, -5, -5, 0, 0}; {0, 0, 9, 5, 10, 0, 5, 1, 6, 6, 8, 4}; {3, -2, 2, 5, 5, 5, 6, 1, 6, 4, 0, 0}; {0, 0, 9, 5, 11, 11, 0, 4, 8, 3, 6, 7}; {-4, 3, -5, -1, -5, -4, 6, 4, -5, -5, 0, 0}; {3, -5, -4, -3, 3, -2, -5, 5, 0, 3, 0, 0}; {0, -5, -1, 4, 4, 0, 3, {-1, -3, -3, 0, 0}; {0, 5, -5, -2, -1, -3, -4, 3, -3, 3, 0, 0}; {0, 0, 9, 8, 2, 5, 0, 6, 7, 11, 9, 2}; {-2, -2, -5, 6, 0, 5, -1, 4, -3, -3, 0, 0}; {2, -2, 3, -2, 4, 5, 2, 2, 5, 5, 0, 0}; {3, -3, 0, 6, 5, 1, 4, {-1, -3, -2, 0, 0}; {2, -2, 3, -1, 6, 5, 1, 2, -4, {-1, 0, 0}; {-5, -1, 0, 4, -2, 5, 2, 2, -2, 2, 0, 0}; {4, -5, -5, -1, 4, -1, 2, 0, -2, 5, 0, 0}; {1, 3, 2, 6, 0, -5, -1, -1, 5, 3, 0, 0}; {-5, 2, 6, 3, 4, 6, -1, 0, -3, 6, 0, 0}; {6, -3, -2, 3, -3, 4, -3, -2, 6, 2, 0, 0}; {-4, 0, 2, -3, 3, 0, 4, 6, 3, 1, 0, 0}; {0, 0, 10, 1, 8, 1, 4, 5, 10, 10, 4, 1}; {-4, 2, 6, 3 4, 6 -1, -3, 6, 0, 0}; {3, -2, 2, -3, 2, 4, 5, -5, 1, 0, 0}; {0, 0, 10, 2, 3, 8, 9, 10, 6, 1, 7, 0}; {2, -4, 0, -2, 6, 6, 1, -4, -2, 0, 0, 0}; {-1, -1, -3, 1, -5, 4, 1, 1, 5, -3, 0, 0}; {1, -4, {-1, 0, 2, -2, 2, 5, -5, 4, 0, 0}; {4, -1, 4, 4, -1, 0, -4, 5, -2, 0, 0, 0}; {4, 0, 6, -5, 4, -5, -1, 4, 3, -2, 0, 0}; {1, 6, -3, -4, 2, 6, 2, {-1, -2, 2, 0, 0}; {3, -1, 5, -5, 6, -{-1, 2, 1, 0, 4, 0, 0}; {0, 5, -4, -4, {-1, 6, 1, -2, -3, 2, 0, 0}; {0, 0, 10, 5, 5, 10, 3, 9, 10, 10, 2, 9}; {5, 3, -1, 4, 4, -1, 4, -5, 5, -2, 0, 0}; {3, 0, -5, 0, -5, -2, 1, 0, 3, 4, 0, 0}; {1, -1, -5, 2, -4, -3, -2, 4, -4, 0, 0, 0}; {0, 0, 10, 7, 3, 8, 3, 7, 6, 8, 11, 4}; {-3, 4, -3, 1, 5, 2, -1, 0, -2, -4, 0, 0}; {-3, 6, 1, -5, 1, 1, -1, 2, 5, -1, 0, 0}; {5, -3, -1, 1, -2, 5, 2, 3, 0, 4, 0, 0}; {-5, 4, -1, 6, -3, 6, 5, 3, -5, -2, 0, 0}; {1, 0, -3, -4, 1, 5, -2, 5, -2, -3, 0, 0}; {0, 0, 10, 11, 0, 2, 6, 10, 8, 3, 10, 3}, {-2, 4, -4, 3, -4, -5, -1, -1, 3, 3, 0, 0}; {-4, 2, -5, 2, -3, 6, 5, -2, 0, 2, 0, 0}; {{-1, 6, 0, -4, -4, 2, 6, -4, -2, 1, 0, 0}; {0, 0, 11, 1, 3, 9, 8, 5, 1, 6, 0, 8}; {6, 1, -5, 4, 4, -1, 3, -5,

-4, 0, 0, 0}; {-4, 2, -5, 3, 4, 6, 0, 0, -3, -5, 0, 0}; {0, 0, 11, 4, 1, 7, 8, 1, 3, 9, 0, 9}; {-1, 4, -4, -5, 1, 4, 2, -1, -3, 2, 0, 0}, {-1, 1, 2, -2, 2, -1, 3, -3, 6, 5, 0, 0}; {0, 0, 11, 6, 1, 0, 4, 7, 10, 5, 8, 4}; {-5, 2, -4, -2, 1, 3, -3, 5, 1, 1, 0, 0}; {-5, 3, -2, 1, -4, -1, 3, 3, -1, -2, 0, 0}; {-4, 4, -1, 3, -2, 1, 3, 2, 4, 5, 0, 0}; {3, -3, 2, 4, -3, 5, 3, 4, -1-2, 0, 0}; {0, 0, 11, 7, 8, 4, 11, 10, 2, 2, 9, 2}; {5, 2, -2, 3, 1, {-1, -4, -2, 5, -3, 0, 0}; {6, 3, -1, 5, -5, 3, 6, 5, 5, -2, 0, 0}; {1, -4, 2, 6, -4, 3, {-1, 0, -2, -3, 0, 0}; {-5, 4, 0, -5, -5, 5, -5, 2, 5, -2, 0, 0}; {2, -1, -5, 2, 6, 3, 2, 2, -5, -2, 0, 0}; {0, 0, 11, 9, 4, 9, 3, 9, 3, 4, 8, 8}; {5, {-1, -4, 2, -4, -1, 1, 0, 3, 4, 0, 0}; {6, 0, 5, 3, 5, 5, 5, 3, -3, -4, 0, 0}; {-5, 1, 6, 0, -4, 5, 5, -3, 0, {-1, 0, 0}; {2, -2, 5, 1, 2, -3, 1, 6, -4, -1, 0, 0}; et {1, -4, 2, -3, - 1, -2, -3, 0, 5, 6, 0, 0}; et

{0, 0, 0, 0, 3, 6, 0, 10, 6, 3, 8, 1}; {0, 0, 1, 3, 3, 9, 6, 2, 4, 11, 2, 9}; {0,0, 3, 0, 9, 4, 3, 3, 9, 1, 8, 0}; {0, 0, 3, {-1, 10, 11, 8, 2, 6, 1, 2, 7}; {0, 0, 3, 1, 11, 6, 7, 1, 4, 11, 7, 11}; {0, 0, 3, 6, 10, 8, 8, 3, 11, 9, 0, 8}; {0, 0, 3, 7, 1, 4, 7, 6, 4, 0, 5, 2}; {0, 0, 4, 8, 8, 3, 9, 0, 7, {-1, 10, 10}; {0, 0, 6, 5, 3, 5, 1, 5, 1, 8, {-1, 2}, {0, 0, 6, 6, {-1, 3, 4, 4, 5, 0, 6, 0}; {0, 0, 6, 8, {-1, 3, 1, 4, 9, 5, 11, 8}; {0, 0, 7, 8, 8, 6, 2, 9, 6, 10, 3, 9}; {0, 0, 7, 8, 10, 9, 11, 2, 9, 1, 8, 4}; {0, 0, 8, 4, 4, 9, 3, 0, 5, 11, 2, 2}; {0, 0, 8, 5, 7, 10, 2, 10, 0, 11, 4, 11}; {0, 0, 8, 6, 9, 3, 11, 3, 4, 0, 4, 5}; {0, 0, 9, 1, 3, 9, 9, 9, 3, 0, 5, 0}; {0, 0, 10, 0, 7, 11, 7, 4, 11, 11, 2, 5}; {0, 0, 10, 11, 2, 7, 8, 2, 10, 2, 8, 4}; et {0, 0, 11, 6, 5, 0, 8, 1, 0, 4, 10, 1}; et

le traitement (S104) du premier signal sur la base des N éléments dans la séquence $\{f_n\}$.

4. Procédé de traitement de signal selon la revendication 3, dans lequel la réception d'un premier signal porté sur N sous-porteuses comprend :

l'obtention du premier signal sur les N sous-porteuses sur N sous-porteuses consécutives ; ou l'obtention du premier signal sur les N sous-porteuses sur N sous-porteuses équidistantes.

5. Appareil de traitement de signal basé sur une séquence, comprenant :

une unité de traitement, configurée pour déterminer une séquence $\{f_n\}$ comprenant N éléments, dans lequel $f_n$ est un élément dans la séquence $\{f_n\}$, la séquence $\{f_n\}$ est une séquence respectant une condition prédéfinie, la condition prédéfinie est $f_n = A \cdot x_n \cdot e^{2\pi j \cdot \alpha \cdot n}$, une valeur de n est comprise dans une plage allant de 0 à N-1, A est un nombre complexe non nul, α est un nombre réel, $j = \sqrt{-1}$ , pour un élément $X_n$, $x_n = u \cdot e^{2\pi j \cdot s_n/M}$, M=12, u est un nombre complexe non nul, et un ensemble qui est constitué d'une première séquence $\{S_n\}$ constitué d'un élément $S_n$ comprend au moins une des séquences dans un premier ensemble de séquences, dans lequel

les séquences dans le premier ensemble de séquences comprennent tout ou partie des séquences suivantes :

{-2, 4, -2, 4, 0, 2, 2, 0, 5, 5, 0, 0}; {-1, 6, {-1, -4, -2, 4, -5, -5, 6, -5, 0, 0}; {3, -3, 3, -3, 0, -2, -2, 0, -5, -5, 0, 0}; {2, -4, 2, -4, -1, -2, -2, -1, -5, 6, 0, 0}; {-4, 2, -4, 3, -1, 1, 2, 1, 4, 5, 0, 0}; {0, 6, 0, -5, -2, -4, -3, -1, 6, 6, 0, 0}; {0, 6, 0, -5, -2, -3, -3, -1, 6, 6, 0, 0}; {-1, 5, -1, 6, -2, -3, -3, -1, 5, 5, 0, 0}; {-4, 2, -4, 4, -4, -5, -4, -2, 5, 5, 0, 0}; {-5, 1, -5, 3, -5, 6, -5, -3, 5, 5, 0, 0}; {4, -2, 4, 0, -4, -1, 0, -1, 3, 4, 0, 0}; {0, 4, -4, 2, -3, -2, -3, 4, 1, -2, 0, 0}; {-1, 3, -5, 1, -4, -3, -3, 4, 1, -2, 0, 0}; {0, 5, -2, 5, 2, 4, 3, 1, -3, -4, 0, 0}; {-3, {-1, 5, -1, -5, -4, -5, 3, 0, -3, 0, 0}; {3, -3, 3, -1, 0, 6, -3, -3, -5, -4, 0, 0}; {1, 6, -1, 6, 6, 0, 2, 0, -3, -1, 0, 0}; {5, -2, 3, -2, 0, -1, 0, 0, -5, 6, 0, 0}; {-3, 3, -3, 5, -4, -4, -4, -2, 5, 5, 0, 0}; {-3, 0, 3, -3, 3, {-1, 3, -5, 4, 1, 0, 0}; {-1, 4, -3, 5, 4, -2, {-1, 0, -3, -2, 0, 0}; {3, -1, -5, -5, 1, -4, 0, 1, 4, -1, 0, 0}; {2, -2, 6, 6, {-1, -5, 0, 1, 4, -1, 0, 0}; {0, -5, 2, 2, -5, {-1, 4, 4, 6, 1, 0, 0}; {1, -3, 5, 6, 0, -5, -1, 1, 3, -1, 0, 0}; {-3, 4, -1, - 1, 5, -1, 3, 4, 5, 0, 0, 0}; {-5, 1, -5, 6, -1, 4, -5, -5, -5, {-1, 0, 0}; {-2, 5, 0, 0, 6, 0, 3, 4, 5, 0, 0}; {-5, {-1, -5, 6, -1, 5, -5, 6, -5, {-1, 0, 0 {3, -3, 3, 3, -4, 2, 5, 5, 6, 0, 0, 0}; {-3, 3, -3, -3, 4, -2, -5, -5, 6, 0, 0, 0}; {4, -3, 2, 2, -4, 1, -2, -3, -5, 0, 0, 0}; {5, -1, 5, 6, {-1, -5, 5, 6, 5, -1, 0, 0}; {5, -1, 5, 6, 1, -4, 5, 5, 5, -1, 0, 0}; {3, -4, {-1, 1, -5, 1, -3, -4, -5, 0, 0, 0}; {-1, 3, -5, 6, 0, 5, {-1, -1, -3, 1, 0, 0}; {0, 5, -2, -2, 5, -1, -4, -4, 6, -1, 0, 0}; {-2, 2, 6, 6, -1, 5, 0, -1, -4, 1, 0, 0}; {-2, 2, 6, 6, 0, 5, 1, -1, -3, 1, 0, 0}; {-3, 1, 5, 5, -1, 4, 0, -2, -4, 1, 0, 0}; {-3, 1, 5, 5, -1, 4, 0, -1, -4, 1, 0, 0}; {-2, 3, -4, -3, 4, -2, -5, -5, 6, -1, 0, 0}; {3, 0, -3, 3, -3, -1, -3, 5, -4, -1, 0, 0}; {4, -2, 4, -4, 4, 5, 4, 2, -5, -5, 0, 0}; {-5, 2, -3, 2, 0, 1, 0, 0, 5, 6, 0, 0}; {-1, 5, -1, 3, 5, 1, 1, 6, 5, -1, 0, 0}; {0, -5, 2, -5, -2, -4, -3, -1, 3, 4, 0, 0}; {4, -2, 4, -3, 6, 6, 4, 3, -5, -5, 0, 0}; {2, -4, 2, -5, 4, 5, 3, 2, -5, -5, 0, 0}; {-3, 3, -3, 2, 0, -5, 4, 3, -1, 0, 0, 0}; {0, 6, 0, 5, 3, 4, 3, {-1, 6, 6, 0, 0}; {6, 0, 6, -1, 2, 0, -1, 0, -4, -5, 0, 0}; {-4, 4, {-1, -4, -4, 0, 4, 0, 3, -1, 0, 0}; {-1, 5, 0, 5, 3, 3, 2, 1, 6, -5, 0, 0}; {-3, 2, -4, 0, -2, -4, -5, 4, -4, -4, 0, 0}; {-1, 6, 2, -4, -2, -3, 4, -5, -1, 2, 0, 0}; {5, -2, 4, -3, 5, 6, 5, 3, -5, 5, 0, 0}; {-1, 5, 0, 6, -3, -4, -4, -2, 6, 6, 0, 0}; {-5, 1, -4, 3, -5, 6, -5, -3, 5, 5, 0, 0}; {5, -3, 2, -5, -3, 6, 3, -4, 6, 0, 0, 0}; {3, -5, 0, 5, -4, 5, 2, -5, 5, 0, 0, 0}; {0, 5, -1, 5, 5, -2, -2, 2, 2, 2, 0, 0}; {-5, 0, 6, 0, 2, 0, 0, 1, - 4, -5, 0, 0}; {-4, {-1, -5, 3, -5, 6, -4, -3, 5, 5, 0, 0}; {-3, {-1, 6, 1, -5, -4, -4, 3, 1, -2, 0, 0}; {6, -3, 1, -5, 1, 0, {-1, 6, 3, 0, 0, 0}; {-5, -1, 4, 0, 3, -3, -4, 2, 0, -2, 0, 0}; {5, 0, -4, -4, 2, -3, 1, 2, 4, -1, 0, 0}; {3, -2, 6, 6, {-1, -4, 0, {-1, 4, -1, 0, 0}; {-1, 5, 0, 0, 5, 0, 4, 4, 5, 0, 0, 0}; {5, -1, 6, 6, -1, -2, 4, 6, 2, 0, 0, 0}; {-1, 5, 0, 0, 6, 0, 3, 4, 5, 0, 0, 0}; {-1, 4, -2, -2, 4, -1, -4, -4, 6, -1, 0, 0}; {-5, -1, 4, 3, -3, 3, -1, -2, -4, 0, 0, 0}; {-3, 1, 6, 5, -1, 4, 0, -2, -3, {-1, 0, 0}; {-2, 3, -3, -3, 4, -2, -5, -5, 6, -1, 0, 0}; {-5, -1, 4, 3, -2, 3, -1, -2, -4, 0, 0, 0}; {-4, 1 -5, -5, 3, -3, 6, 6, 6, -1, 0, 0}; {6, -2, 3, 2, -3, 2, -1, -3, -4, 0, 0, 0}; {3, 6, -2, -3, 3, -5, 3, 1, -2, 2, 0, 0}; {-5, -1, 4, 4, -3, 3, -1, -2, -4, 1, 0, 0}; {6, -2, 3, 3, -3, 3, -1, -2, -4, 0, 0, 0}; {5, -3, 2, 2, -4, 2, -2, -3, -5, 0, 0, 0}; {5, 1, -2, 4, -2, 0, -3, 6, -4, -1, 0, 0}; {3, -2, 6, -1, 4, 5, 1, -2, -2, 0, 0, 0}; {5, -1, -5, -1, 1, 3, -3, 3, 1, 0, 0}; {4, 1, 0, -5, 1, 6, 2, 2, 5, -3, 0, 0}; {3, -1, -3, 3, -3, -1, 6, -4, -5, -1, 0, 0}; {1, -3, -5, 1, -5, -2, 6, -5, 6, -3, 0, 0}; {2, -5, 2, -5, 4, 5, 3, 2, -5, -5, 0, 0}; {-1, 3, -3, 1, 0, 4, 1, -5, 6, 2, 0, 0}; {-2, 2, -4, 0, -1, 3, 1, 6, 5, 3, 0, 0}; {5, -1, -5, 2, -5, -1, 3, 5, 4, 4, 0, 0}; {5, -1, -5, 2, -5, -1, 3, 6, 5, 4, 0, 0}; {0, 4, -2, 3, 6, 4, 0, 6, 4, 0, 0, 0}; {-3, 3, -1, 6, -5, -2, -4, -2, 3, 3, 0, 0}; {-4, -1, 4, -3, -1, -5, 3, -4, 5, 0, 0, 0}; {-5, -2, 3, -4, -2, -5, 4, -4, 6, 0, 0, 0}; {0, 4, -2, 4, -2, -3, -1, -1, 4, 3, 0, 0}; {6, -3, 2, -5, 4, -5, -5, -3, 6, 3, 0, 0}; {6, -2, 4, -2, -4, 1, 0, 4, 4, 2, 0, 0}; {6, -2, 4, -2, -3, 2, 1, 5, 4, 2, 0, 0}; {4, -3, 4, 0, 0, 6, -5, -1, 1, -1, 0, 0}; {-1, 2, -5, 1, 0, 4, 3, 6, 5, 3, 0, 0}; {3, 5, -3, 2, 3, -1, 6, -1, -5, 1, 0, 0}; {-2, 1, 6, 0, -5, -4, -2, -2, 4, 2, 0, 0}; {-3, 2, -3, 6, -3, 3, 4, -1, -2, -3, 0, 0}; {1, 3, -5, 1, 2, -3, 4, -3, 5, 0, 0, 0}; {0, 2, 6, 0, 1, -3, 4, -3, 5, 0, 0, 0}; {-3, -1, 3, -2, 6, -2, -5, -3, -5, 5, 0, 0}; {0, 3, -4, -5, 1, 6, 1, 0, -3, 1, 0, 0}; {-4, 3, 0, 4, -4, -3, 4, 0, 0, -1, 0, 0}; {-4, 4, 2, -5, 0, 3, -2, -5, -2, 0, 0, 0}; {-5, 3, 1, 6, -1, 2, -2, -5, -2, 0, 0, 0}; {5, 1, 0, 5, -2, 2, -3, 6, -2, 0, 0, 0}; {-4, 4, 3, -3, 3, -5, 4, 5, 5, -4, 0, 0}; {4, -1, -3, 3, -3, -1, -5, -4, 6, -2, 0, 0}; {-1, 5, 2, -4, -4, 1, 5, -1, 1, 0, 0, 0}; {-3, 3, 0, 6, -5, -1, -5, -2, 3, 2, 0, 0}; {2, 6, 1, 6, 6, -1, -2, 4, 3, 1, 0, 0}; {-1, 2, -4, 0, 0, 4, 2, -5, 5, 2, 0, 0}; {-2, 4, 1, -4, 3, -5, -1, 4, 4, 3, 0, 0}; {-5, -1, 6, -1, -3, 1, 2, -5, 4, 2, 0, 0}; {4, -4, 3, -4, -5, 0, -1, 4, 4, 1, 0, 0}; {4, -4, 3, -4, -5, 0, -1, 4, 4, 2, 0, 0}; {2, 5, -1, 3,

1, 5, 3, -4, 6, 3, 0, 0}; {1, 4, -2, 3, 1, 5, 3, -5, 6, 3, 0, 0}; {3, -4, 4, -1, -1, 5, 6, -1, 1, 1, 0, 0}; {-2, 1, -5, 0, -1, 3, 2, 6, 5, 3, 0, 0}; {-2, 4, 1, -3, 3, -5, 0, 3, 3, 3, 0, 0}; {6, -2, 5, -1, 5, 5, -4, -4, 5, 5, 0, 0}; {5, -3, 4, -2, 5, 5, -5, -4, 5, 5, 0, 0}; {5, -2, 6, 1, 0, 6, -5, 0, 2, 0, 0, 0}; {1, 4, -2, 3, 0, 4, 4, -4, 6, 3, 0, 0}; {0, 2, -5, 0, 1, -3, 4, -3, 5, 0, 0, 0}; {-2, 0, 5, -2, 0, -4, 4, -3, 6, 0, 0, 0}; {5, -5, 0, 6, 3, -5, 5, -4, 6, 5, 0, 0}; {-5, -2, 4, -1, 5, -4, -5, 3, 0, -2, 0, 0}; {-3, -1, 4, 2, 4, -1, 6, 1, 0, 4, 0, 0}; {5, -5, 1, -1, 2, -3, 4, -1, -1, 3, 0, 0}; {-2, -5, -4, 2, -3, 2, 0, 2, 3, -5, 0, 0}; {0, -5, 6, -1, 3, 6, 1, -3, -1, -1, 0, 0}; {5, 0, -1, 5, 5, -3, 3, -2, 1, 0, 0, 0}; {1, -4, -5, 1, 3, -5, 1, -3, 0, -1, 0, 0}; {-5, 2, 1, -5, -2, 3, -3, 6, -2, 0, 0, 0}; {0, 6, 4, -2, -4, 1, 5, -1, 1, 1, 0, 0}; {-1, 4, 1, -5, -3, 3, 4, -1, 0, -2, 0, 0}; {-2, 4, 2, -3, 1, 5, 4, 5, -1, 2, 0, 0}; {-3, -1, 5, -2, -1, -5, 3, -4, 5, 1, 0, 0}; {-5, -3, 3, -4, -2, 6, 1, -5, 4, -1, 0, 0}; {6, -5, 0, 4, 5, 0, -5, -1, -5, 1, 0, 0}; {0, 4, 0, -5, -1, 4, 5, 1, -1, -3, 0, 0}; {2, -3, -3, 3, 5, 1, -4, 1, -2, -1, 0, 0}; {-3, 3, 2, -4, -3, 5, -1, 3, 0, 0, 0, 0}; {-4, 2, 1, -5, -4, 4, -2, 2, 0, 0, 0, 0}; {-3, -1, 6, -4, 6, 2, 5, -1, -4, 5, 0, 0}; {1, -4, -4, 3, 2, 6, 0, -3, 0, -1, 0, 0}; {1, 5, 4, -2, -4, 0, 5, 0, 2, 1, 0, 0}; {0, -5, -5, 2, 1, 6, 0, -4, -1, -1, 0, 0}; {-1, 6, 6, 1, 1, 6, 0, -4, -1, -1, 0, 0}; {-4, 2, 1, -5, 6, -1, 3, -2, 1, 0, 0, 0}; {-3, 4, 4, -1, -1, 5, -2, 6, -2, -2, 0, 0}; (-4, 3, 3, -2, -2, 4, -2, 6, -2, -1, 0, 0}; {-4, 3, 3, -2, -1, 4, -2, -5, -1, -1, 0, 0}; {-5, 1, 0, 6, 6, -2, 4, -1, 1, 0, 0, 0}; {-4, 3, 3, -2, -1, 4, -1, -5, -1, 1, 0, 0}; {3, 5, 0, 3, -4, 4, 2, -5, 5, -1, 0, 0}; {-3, 3, 2, -3, 6, -3, 3, 0, 1, -1, 0, 0}; {1, 4, 0, -5, -1, 4, 5, 1, -1, 4, 0, 0}; {-3, -2, 4, -2, -1, -5, 2, -5, 4, -1, 0, 0}; {-4, 2, 2, -5, -3, 4, -2, 3, 0, 0, 0, 0}; {5, -3, -5, -1, -3, 4, -4, -3, 5, 4, 0, 0}; {-5, 3, 5, 1, 3, -4, 4, 3, -5, -4, 0, 0}; {6, 0, 0, 6, -5, 3, -2, 2, -1, 0, 0, 0}; {6, 0, 0, 6, -5, 3, -2, 3, -1, 0, 0, 0}; {-4, 2, 2, -4, 6, -2, 4, -1, 1, 1, 0, 0}; {-5, 1, 1, -5, 5, -3, 3, -2, 1, 1, 0, 0}; {6, 0, 0, 6, 5, -3, 2, -2, 1, 0, 0, 0}; {6, 0, 0, 6, 5, -3, 3, -2, 1, 0, 0, 0}; {4, -2, -2, 5, 3, -4, 2, -3, 0, 0, 0, 0}; {6, 3, -5, 2, -4, 6, 5, 3, 6, 5, 0, 0); {-3, -5, 0, -3, 4, -4, -2, 5, -5, 1, 0, 0}, {-4, 3, 5, -1, -5, 2, 6, -5, 0, 0, 0, 0}; {4, -2, -1, 5, 4, -4, 2, -2, 0, 0, 0, 0}; {-1, 4, 4, -3, -2, 6, 0, 3, 0, 1, 0, 0}; {0, -5, -3, 4, -4, 5, 1, -5, -5, -2, 0, 0}; {5, -2, -2, 3, 0, 4, -4, 3, 1, 2, 0, 0}; {0, 6, -5, 2, 0 5, 0, -4, -1, 0, 0, 0}; {-2, 3, 3, -3, -5, -1, 4, -1, 2, 1, 0, 0}; (3, -4, -4, 2, -2, 1, -5, 3, 1, 1, 0, 0}; {2, -4, -3, 4, 1, 6, 1, -3, -1, 0, 0, 0}; {0, 4, 3, -4, 3, 6, -1, 6, 4, 2, 0, 0}; {-5, 5, -1, 1, -2, 3, -4, 1, 1, -3, 0, 0}; {-1, -3, 3, -4, 6, 3, -2, 0, -5, -1, 0, 0}; {-4, 4, -4, 1, -5, -4, 6, 4, 5, -5, 0, 0}; {6, 5, 0, -4, -5, 0, 5, 1, 5, -1, 0, 0}; {5, 3, -3, 4, 2, 6, -1, 5, -4, 1, 0, 0};

{3, 1, -5, 2, 1, 5, -3, 4, -5, 1, 0, 0}; {4, -1, 2, -5, 0, -1, -3, -5, -4, -3, 0, 0}; {3, -2, 1, -5, 1, -2, -4, 6, -5, -3, 0, 0}; {-4, 1, 2, -5, -4, 4, -2, 5, 0, 1, 0, 0}; {2, -4, -2, 4, 0, 5, -3, -3, 1, -1, 0, 0}; {5, -2, -1, 5, 2, -3, 3, 6, 2, 0, 0, 0}; {2, 5, 4, -2, 3, -2, 0, -2, -3, 5, 0, 0}; {-5, -1, 0, -5, 2, -2, 3, 6, 2, 0, 0, 0}; {3, 1, -4, -2, -4, 1, 6, -1, 0, -4, 0, 0}; {2, -1, 5, -2, -5, 5, 0, 1, -4, -1, 0, 0}; {2, 0, -5, 2, 0, 4, -4, 3, 6, 0, 0, 0}; {0, -2, 5, 0, -1, 3, -4, 3, -5, 0, 0, 0}; {4, -1, 3, -4, 2, -1, -4, 6, -5, -4, 0, 0}; {2, -4, -1, 3, -3, 5, 0, -3, -3, -3, 0, 0}; {4, -2, 1, 6, 0, -1, -3, -5, -4, -3, 0, 0}; {-1, 5, -4, 1, -5, 3, -1, -4, -4, -3, 0, 0}; {-2, 4, -5, 0, 6, 2, -1, -4, -4, -3, 0, 0}; {3, -3, 0, 6, 5, 1, 5, 2, -3, -2, 0, 0}; {5, 2, -4, 5, 1, 5, -4, 4, 6, 0, 0, 0}; {3, 3, 0, 1, -5, 0, 6, 2, -4, -4, 0, 0}; {4, -4, -3, 3, -3, 5, -4, -5, -5, 4, 0, 0}; {-1, 3, 5, --1, 5, 2, 6, 5, 6, 3, 0, 0}; {-3, 1, 3, -3, 3, 1, 6, 4, 5, 1, 0, 0}; -4, -1, 0, 5, -1, 6, 2, -2, -5, 3, 0, 0}; {-5, -1, 1, -4, 2, -1, 3, 6, 4, 1, 0, 0}; {5, -3, -1, 6, 1, -2, 2, 5, 2, 0, 0, 0}; {4, -4, -2, 5, -3, 2, 5, 2, 0, 0, 0, 0}; {4, -3, 0, -4, 4, 3, -4, 0, 0, 1, 0, 0}; {4, -2, 2, -1, -1, 6, -1, -3, -5, -4, 0, 0}; {0, -3, 4, 5, -1, 6, -1, 0, 3, -1, 0, 0}; {0, -2, 6, 0, -1, 3, -4, 3, -5, 0, 0, 0}; {-1, -3, 5, -1, -2, 3, -4, 3, -5, 0, 0, 0}; {-5, 2, -5, -1, 6, -5, 6, 4, -5, -5, 0, 0}; {-5, 3, -3, 2, -2, 0, 1, 0, 4, 5, 0, 0}; {-3, -5, 3, -2, -3, 1, 6, 1, 5, -1, 0, 0}; {-3, 5, -1, 5, -1, 1, 2, 1, 4, 5, 0, 0}; {-4, 4, -2, 4, -2, 1, 2, 1, 4, 5, 0, 0}; {-5, 3, -3, 3, -2, 0, 1, 0, 4, 5, 0, 0}; {4, -1, 4, -3, 4, 5, 5, 3, 6, 6, 0, 0}; {1, -4, 1, 6, 1, 2, 6, 5, 1, -1, 0, 0}; {2, -3, 2, -5, 3, 4, 4, 2, 6, 6, 0, 0}; {5, 2, -3, 4, 2, 5, -4, 4, 6, 0, 0, 0}; {4, 1, -4, 3, 1, 5, -3, 4, -5, 0, 0, 0}; {-5, 3, -3, 5, 3, -5, -3, 4, 6, 0, 0, 0}; {-2, 6, 0, -4, 4, -5, -2, 5, -5, 0, 0, 0}; {3, -2, 3, -1, 0, 6, -2, -3, -5, -4, 0, 0}; {0, -5, 0, -4, 1, 3, 2, 1, 5, 5, 0, 0}; {-1, 6, 0, -4, 3, 2, 2, -4, -1, 2, 0, 0}; {6, 1, -5, 3, -5, 6, -5, -2, 3, 4, 0, 0}; {-1, 5, -2, 6, -1, 2, 2, 0, 4, 4, 0, 0}; {-3, 2, 6, 1, -4, -5, -1, 2, 2, 0, 0, 0}; {-5, -1, 2, -4, 2, 0, 3, 6, 4, 1, 0, 0}; {5, -1, 4, 1, -2, -3, 3, -4, -2, -1, 0, 0}; {0, -4, 3, 3, -4, -4, 0, 4, 0, 1, 0, 0}; {-5, 3, -2, -2, 4, -2, 2, 3, 5, 0, 0, 0}; {6, 2, -3, -3, 3 -3, 1, 2, 4, 0, 0, 0}; {5, 1, -4, -4, 3, -3, 1, 2, 4, -1, 0, 0}; {6, 2, -3, -2, 3, -2, 1, 3, 4, 0, 0, 0}; {4, -1, 5, 5, -3, 3, 6, 6, 6, 1, 0, 0}; 5, 1, -4, -3, 2, -3, 1, 2, 4, 0, 0, 0}; {5, 1, -4, -3, 3, -3, 1, 2, 4, 0, 0, 0}; {2, -3, 3, 3, -4, 2, 5, 5, 6, 1, 0, 0}; {1, -4, 2, 2, -4, 1, 4, 4, 6, 1, 0, 0}; { 1, -5, 0, 0, 6, 0, -3, -4, -5, 0, 0, 0}; {-5, 1, 6, 6, 1, 2, -4, 6, -2, 0, 0, 0}; { 1, -5, 0, 0, -5, 0, -4, -4, -5, 0, 0, 0}; {-3, 2, 6, 6, -1, 4, 0, -1, -4, 1, 0, 0}; {-5, 0, 4, 4,2, 3, -1, -2, -4, 0, 0, 0); {6, -1, 3, 3, -2, 3, -1, -3, -4, 1, 0, 0}; {-1, -3, 6, 0, 3, -1, 2, 3, 3, -4, 0, 0}; {6, 3, -1, 5, -1, 0, -1, 6, -3, 0, 0, 0}; {6, 2, -3, 2, -4, -1, 3, 4, -1, -1, 0, 0}; {3, -2,

4, -4, 3, 4, 5, 3, 6, 6, 0, 0}; {4, -1, 5, -3, 5, 6, 4, 3, -5, -5, 0, 0}; {1, -4, 2, 6, 2, 3, 4, 2, 6, 6, 0, 0}; {1, -4, 2, -5, 3, 4, 3, 2, 6, 6, 0, 0}; -2, 5, -1, 4, 1, 2, 2, 1, 5, 6, 0, 0}; {5, -1, 4, -3, 5, 6, 5, 3, -5, -5, 0, 0}; {-5, 3, -2, 5, 3, 6, -3, 4, 6, 0, 0, 0}; {-3, 4, -2, 4, -1, 1, 2, 1, 4, 5, 0, 0}; {-5, 2, -4, 2, -2, 0, 1, 0, 4, 5, 0, 0}; {-3, 5, 0, -5, 4, -5, -2, 5, -5, 0, 0, 0}; 6, 0, 5, -1, -5, -5, 5, 4, -4, -4, 0, 0}; {2, -4, 1, -5, 3, 4, 4, 2, 6, 6, 0, 0}; {2, -4, 1, -5, 4, 4, 4, 2, 6, -5, 0, 0}; {-1, 6, 0, --5, --2, -4, -3, -1, 5, 5, 0, 0}; {-1, 6, 0, -5, -2, -3, -3, -1, 5, 5, 0, 0}; {-4, 3, -3, 4, -4, -5, -4, -2, 5, 5, 0, 0}; {-5, 2, -4, 3, -5, 6, -5, -3, 5, 5, 0, 0}; {-5, 2, -4, 3, -4, -5, 5, -1, 2, 4, 0, 0}; et {-2, 5, -1, 6, -1, 2, 3, 1, 4, 5, 0, 0}; {-3, 2, -5, 0, -1, -3, -5, 5, -3, -4, 0, 0}; {6, 0, 6, 0, 4, -5, -4, 2, 0, -2, 0, 0}; {0, 0, 0, 1, 10, 8, 5, 0, 4, 9, 10, 2}; {1, -5, 1, -3, -5, -1, -1, 6, -5, 1, 0, 0}; {-4, 1, 6, 1, -2, 6, 0, 2, 4, 3, 0, 0}; {-3, 1, 5, 0, -5, -3, -4, 3, 0, -2, 0, 0}; {4, 5, 6, -2, 3, -1, 4, -1, -2, 4, 0, 0}; {-4, -1, 2, -4, 6, -2, -4, -5, -4, 3, 0, 0}; {-2, 3, -4, 4, 5, 6, 1, 1, -3, -5, 0, 0}; {0, 0, 0, 4, 8, 11, 9, 6, 10, 5, 0, 11}; {2, -4, 2, 1, 6, 4, -5, -1, 3, 1, 0, 0}; {5, 3, 1, 5, 1, 3, -2, 5, 6, -3, 0, 0}; {4, 6, -4, 4, -3, 6, 0, 6, 6, 3, 0, 0}; {-4, 0, 4, 3, -2, 3, -1, -2, -5, 0, 0, 0}; {-5, -5, -5, 2, 6, -2, 6, 4, -3, 6, 0, 0}; {-2, -4, 6, 0, 5, -3, -5, 3, -4, -1, 0, 0}, {1, -2, -5, 0, 5, 0, 3, 2, 4, 6, 0, 0}; {2, -3, 4, -4, -5, 6, -1, -1, 3, 5, 0, 0}; {4, 0, -4, 2, 1, 4, -4, 3, 5, 0, 0, 0}; {3, -2, 5, -2, 0, -2, -3, 3, 3, -2, 0, 0}; {5, -1, 5, -2, 0, 0, -1, 0, -4, 6, 0, 0}; {6, 1, -3, 3, -4, 0, 4, 6, 6, 5, 0, 0}; {6, 0, -5, 1, 0, 2, 0, 0, 5, 5, 0, 0}; {-1, 6, 2, -2, 3, -4, 0, 3, 3, 3, 0, 0}; {-1, 5, 0, -5, 3, 2, 2, -5, -2, 1, 0, 0}; {1, 6, 0, -5, 4, -2, 0, 3, 3, 3, 0, 0}; {0, 0, 1, 3, 11, 7, 11, 4, 5, 0, 0, 7}; {6, -3, 1, -5, -2, -5, 3, -4, 6, 1, 0, 0); {0, 2, 5, -2, 5, 3, 3, -3, 4, 0, 0, 0}, {-4, 1, -5, 4, -4, -5, -4, -2, 5, 4, 0, 0}; {2, 4, -5, 1, 5, 0, -5, 5, 3, -1, 0, 0}; {0, 0, 1, 5, 9, 2, 10, 3, 0, 8, 4, 4}; {-2, -1, 1, -5, 3, 6, 2, 0, -1, 6, 0, 0}; {0, 0, 1, 6, 3, -1, 4, 6, 1, 5, 0, 0}; {-5, 1, -4, -5, -1, 5, -5, -5, -4, 2, 0, 0}; {1, -5, 2, 1, 5, 0, 1, -3, -5, -4, 0, 0}; {-4, 0, 5, 2, -3, -4, 4, -2, 1, 1, 0, 0}; {0, 0, 1, 6, 11, 3, 10, 7, 4, 11, 2, 1}; {5, -1, 6, 6, 5, 2, -5, 4, 6, -4, 0, 0}; {-2, -5, 5, -4, 4, 6, 1, 6, -4, -4, 0, 0}, {-4, 3, -1, 0, 6, 6, -1, 3, -1, -1, 0, 0}; {0, 0, 1, 9, 0, 1, 6, 1, 8, 8, 5, 0}; {0, 0, 1, 9, 2, 5, 4, 8, 5, 1, 0, 6}; {-1, -5, 4, -4, 3, 5, 0, 6, -5, -1, 0, 0}; {0, 0, 1, 10, 1, 8, 11, 3, 2, 8, 7, 2}; {2, -4, 3, -5, -5, 5, -2, 0, 4, 4, 0, 0}; {2, -4, 3, -5, -5, 5, -1, 0, 3, 4, 0, 0}; {0, 0, 2, 0, 8, 9, 6, 10, 3, 9, 9, 2 {-3, 1, -5, -2, -2, 3, -1, 6, 5, 1, 0, 0}; {3, -4, 3, -4, 5, 5, 2, 2, -4, -3, 0, 0}; {-1, 0, 3, 4, -1, -5, 2, -5, 2, 3, 0, 0}; {-5, 0, -5, 1, 3, -4, -4, 2, 1, 0, 0, 0}; {4, -5, 0, 4, 2, 6, 3, -4, 6, 4, 0, 0}; {0, 4, -2, 4, -3, -4, -1, -2, 6, 5, 0, 0}; {5, -4, 1, 6, 1, -1, 1, 0, 6, 3, 0, 0}; {-1, 6, 3, 1, 6, -1, -2, 0, -5, -1, 0, 0}; {3, 6, -1, 5, 0, -2, 0, -2, -4, -5, 0, 0}; {3, -3, 5, 2, 2, -3, 1, -5, -3, -1, 0, 0}; {4, -5, 0, -5, -4, 0, 2, 1, 5, 1, 0, 0}; {-3, 0, 5, 0, -5, -3, -5, 3, 0, -2, 0, 0}; {0, 0, 2, 7, 6, 4, 11, 8, 5, 9, 4, 7}; {-3, 0, 5, 2, -5, 3, -1, -2, 2, 2, 0, 0}; {-1, -1, 1, -4, 6, -3, 3, -2, -1, 5, 0, 0}; {3, 6, -1, -2, 3, -5, 3, 1, -2, 2, 0, 0}; {3, -1, 3 1, 2, 5, 3, -5, 1, 4, 0, 0}; {0, 0, 2, 10, 4, 0, 11, 9, 6, 0, 3, 5}, {4, -2, 6, -3, -4, 6, 1, 0, 3, 6, 0, 0}; {-1, 0, 3, 1, 0, -5, -2, 5, 1, 6, 0, 0}; {0, 0, 2, 11, 10, 4, 6, 9, 3, 8, 2, 9}; {0, 0, 2, 11, 11, 5, 6, 2, 5, 10, 6, 1}; {-5, -2, 4, 4, -2, 3, 0, -2, -4, 0, 0, 0}; {6, 6, -3, -5, 3, -2, 2, -4, 3, 5, 0, 0}; {0, -4, -5, 1, 5, -2, 5, -4, -5, -1, 0, 0}, {-4, 4, 3, -2, 1, 5, -1, -4, -1, -2, 0, 0}; (2, -5, 3, -4, 3, 3, 6, -5, 4, 5, 0, 0}; {0, 0, 3, 3, 7, 1, 5, 3, 1, 11, 7, 11}, {0, 0, 3, 3, 11, 8, 5, 7, 3, 6, 11, 4}; {1, 6, 2, -4, -2, 0, -2, - 1, 4, 3, 0, 0}; {0, 0, 3, 4, 11, 1, 7, 10, 5, 11, 6, 3}; {2, -2, -3, -5, 0, 5, -4, -4, 1, -3, 0, 0}, {-3, 5, 4, 3, -3, 2, 5, -5, 0, 3, 0, 0}; {0, 0, 3, 6, 5, 2, 7, 4, 3, 1, 7, 0}; {-3, 1, -4, 3, 6, -2, -3, 5, 1, -1, 0, 0}; {-1, 2, -4, 2, -4, 6, 1, 2, -2, -2, 0, 0}; {-1, 2, -4, 2, -4, -4, -1, -2, 4, 2, 0, , 0}; {0, 0, 3, 8, 2, 2, 9, 7, 6, 2, 6, 3}; {0, 0, 3, 8, 10, 7, 4, 3, 8, 4, 8, 6}; {3, 2, 4, -3, 6, -1, 5, 0, 1, 5, 0, 0}, {2, 1, 3, -4, 5, -2, 5, 0, 1, 5, 0, 0}; {-5, 3, 2, 5, 3, 0, 4, -3, 5, -4, 0, 0}; {-3, 0, 6, 5, 0, 2, -4, 4, -1, -1, 0, 0}; {0, 0, 4, 0, 6, 1, 9, 7, 6, 2, 5, 8} ; {-2, 1, -4, -4, 4, -4, 3, -1, -4, -2, 0, 0}; 0, 0, 4, 1, 8, 3, 5, 3, 2, 9, 11, 4}; 5, 1, 1, 6, -1, 2, -2, -5, -3, -3, 0, 0}; {-5, 4, 5, -1, 6, -5, 1, 5, 5, -2, 0, 0}; {6, 3, 4, 0, 6, 4, -2, 4, 6, -2, 0, 0}; { -5, 6, -3, -5, 3, -1, 2, -2, 3, 6, 0, 0}; 2, 2, -2, 1, 5, -2, -2, 6, 4, -1, 0, 0}; {-5, -1, -5, -2, 4, -1, -4, 4, 5, 6, 0, 0}; {6, 6, -2, -3, 4, -2, 5, -3, 3, 3, 0, 0}; {3, 3, -5, -5, 1, -3, 3, -4, 2, 3, 0, 0}; {1, 4, -1, 4, -3, -3, 0, -2, 6, 2, 0, 0}; {6, 1, 0, -2, 3, -5, -2, -3, 2, -2, 0, 0}; {3, -5, 3, -1, -5, 6, 2, 5, -2, 0, 0, 0}; {0, 1, 6, -1, 6, 3, 4, -1, -2, 2, 0, 0}; {0, 0, 4, 8, 6, 2, 2, 11, 3, 4, 0, 5}; {-1, 6, 5, 4, -2, 1, -2, 0, 1, -4, 0, 0}; {6, -4, 2, -4, -1, 4, 1, -5, 3, 0, 0, 0}; {0, 4, 0, -4, 2, 2, -2, 6, -4, 0, 0, 0}; {0, 0, 4, 8, 10, 3, 11, 4, 2, 2, 11, 6}; {-3, 1, -3, -6, 4, 6, 5, -1, -5, -4, 0, 0}; {1, 3, -3, 4, 6, -3, 2, 0, 5, 1, 0, 0}; {0, 0, 4, 10, 2, 4, 7, 6, 10, 7, 5, 3}; {1, 4, -1, -3, -1, -4, 5, -2, -2, -5, 0, 0}; {0, 0, 4, 11, 11, 0, 11, 9, 3, 5, 2, 8}; {5, 1, 2, 6, 0, 2, -2, 6, -3, -4, 0, 0}; {3, -3, -4, -1, 3, -2, -5, -5 -1, 4, 0, 0}; {0, 0, 5, 2, 1, 2, 1, 9, 6, 10, 3, 8}; {0, 0, 5, 2, 1, 5, 2, 5, 0, 10, 0, 7}; {2, -4, -5, -1, 2, -4, -4, 4, -1, 1, 0, 0}; {5, 2, 4, -1, 5, 6, 1, 5, 5, -3, 0, 0}; {5, 0, 0, 5, -4, 3, 5, 1, --3, 0, 0, 0}; {0, -3, - 1, -5, 2, -3, -4, 3, -5, -2, 0, 0}, {0, -4, -3, 4, -2, -5, 1, 6, -5, -1, 0, 0}; {-3, -5, -2, -4, 4, -4, 1, 6, -4, 6, 0, 0}; {3, 6, 2, 5, -5, 2, -2, 5, 5, 5, 0, 0}; {2, -4, -5, 1, 1, -5, 2, 6, 1, 1, 0, 0}; {-4, 2, 1, -4, -2, 3, -3, 6, -2, 0, 0, 0}; {-5, 4, 6, 4, -3,0, -4, 2, 2, -4, 0, 0}; {-3, -1, 6, -3, 1, 0, 4, 2, -5, 3, 0, 0}; t-1, 4, 2, -3, -4, 0, 6, -2, 2, 0, 0, 0}; {-1, 0, 6, -3, 6, -2, 6, -1, -4, 6, 0, 0}; {-3, -1, 6, - 2, 3, 1, 0, 5, 33, -2, 0, 0}; {-4, -1, - 5, 1, 0, 5, 0, 3, 5, 4, 0, 0}; {0, -1, 3, 5, 4, -1, 4, 5, 0, 4, 0, 0}; {-1, -1, 4, -5, -4, 3, -2, 1, -3, 2, 0, 0}; {2, -4, -4, -1, 2, -3, 4, 4, -1, 2, 0, 0}; {-3, -5, -1, -5, 4, 3, -3, -1, 5, -2, 0, 0}, {-3, 1, -1, 1, 5, 1, 3, 5, 3, 4, 0, 0}, {2. -3, 2, -1, 3, 4, -3, 2, 5, 2, 0, 0}; {-4, -5, 0, -2, -4, -3, 3, 6, 2, -5, 0, 0}; {0, 0, 6, 5, 8, 6, 6, 8, 1, 6, 11, 7}, {-5, 5, -3, 6, -4, 1, -3, 1, 4, 6, 0, 0}; {-4, 1, 0, 5, 1, 4, -2, 4, 4, 1, 0, 0}; {6, -3, 6, -3, 3, 6, -5, -1, -5, 4, 0, 0}; {4, 2, 6, 4, 6, 0, -4, 0, 3, 6, 0, 0}; {-4, 2, 2, -4, 6, -1, 4, -1, 0, 0, 0, 0}; {-4, 6, -2, -3, 1, -5, 0, 3, 6, 3, 0, 0}; {0, 0, 6, 7, 5, 5, 0, 4, 6, 3, 10, 4}; {-4, -1, -4, 1, -3, 2, 3, -3, 4, 3, 0, 0}; {4, -5, 4, -3, 2, 4, -2, -4, 4, 0, 0, 0}; {-2, 4, 4, 1, -2, 3, 4, -4, 1, -2, 0, 0}; {4, -5, 4, -2, -2, 3, -2, 1, 4, 3, 0, 0}; {0, 0, 6, 9, 6, 10, 5, 9, 8, 1, 11, 9}; {0, 0, 6, 9, 11, 3, 11, 3, 0, 1, 9, 4}; {0, 0, 6, 10, 2, 1, 4, 0, 8, 8, 11, 8}; {-2, -3, 2, 6, 1, -5, -3, 3, 1, -2, 0, 0}; {6, 4, -3, 2, -2, 5, 5, -2, 0, 3, 0, 0}; {4, 2, -5, 0, -3, 6, 0, 2, -4, 0, 0, 0}; {3, 0, 4, -2, 0, 6, 0, -3, -5, -3, 0, 0}; {0, 0, 7, 5, 0, 9, 2, 9, 3, 6, 4, 5}; {-3, 5, 4, 2, 2, 2, 2, -1, -4, -3, 0, 0}; {-2, 3, 3, 1, -4, -3, 4, -4, 2, -2, 0, 0}, {-1, 6, -4, 2, -5, 3, 0, -4, -3, -2, 0, 0}; {-3, 2, 2, 6, -1, -5, 3, 3, 0, 3, 0, 0}; {0, 0, 7, 6, 9, 3, 3, 1, 3, 5, 1, 5}; {-3, 5, 0, -2, 2, 4, -3, 2, 5, 2, 0, 0}; {1, -3, 0, -4, 1, -2, -4, 4, -5, -3, 0, 0}; {-3, 6, -2, -5, -4, 2, -2, 1, 4, 6, 0, 0}; {0, 0, 7, 8, 2, 1, 9, 4, 9, 7, 8, 10}; {0, 3, 1, 5, -2, 3, 4, -3, 5, 2, 0, 0}; {-2, 4, 5, 1, -2, 4, 4, -4, 1, -1, 0, 0}; {-5, 0, 0, -5, 4, -3, -5, -1, 3, 0, 0, 0}, {4, -1, 1, -2, 6, -3, -5, -1, -1, -5, 0, 0}; {-4, 0, -1, 6, 0, 1, -5, 3, 5, 1, 0, 0}; {0, 0, 7, 11, 5, 3, 6, 3, 0, 0, 4, 3 }; {0, 0, -5, -1, 6, -4, 1, -3, 6, -1, 0, 0}; {0, 0, 7, 11, 10, 11, 4, 3, 7, 0, 8, 8}; {-4, 5, -2, 0, 6, -4, 5, 2, -3, 0, 0, 0}, {0, 4, 4, 2, 2, -3, -1, 4, -2, -5, 0, 0}; {0, 0, 8, 3, 3, 2, 4, 10, 2, 0, 8, 0}; {2, 1, -4, 2, 3, -3, 3, 6, 4, -2, 0, 0}; {4, 2, 4, 2, 5, 1, 6, 5, 5, 6,0, 0}; {1, -3, 1, 6, 6, -3, 1, 0, -2, 3, 0, 0}; {2, -1, 4, -1, 6, 5, 1, 2, -4, 1, 0, 0},; {4, 2, -4, 4, 1, 5, -4, 4, 6, 0, 0, 0}; {1, -3, 1, -4, 0, -3, -3, 0, 6, 6, 0, 0}, {-3, 5, -3, 4, -2, -4, 6, 4, -5, -4, 0, 0}; {-2, -5, 0, -4, 6, 5, 4, -1, 5, -3, 0, 0}; {0, 0, 8, 8, 0, 10, 8, 2, 7, 2, 9, 0}; {3, -3, -1, 5, 5, 1, 5, 1, -3, -1, 0, 0}; {-4, -5, 2, 1, 6, -3, 3, -3, 1, -1, 0, 0}; {0, 0, 8, 8, 2, 8, 3, 10,2, 0, 4}; {6, -2, -2, 2, 3 -2, 3, -3, 3, 2, 0, 0}; 5, 6, 1, 0, 2, -1, 4, -1, 2, -5, 0, 0}; {-2, 1, 0, 3, -3, -1, 5, -2, -5, 4, 0, 0}; {-3, 1, 1, 6, 3, -1, 4, 6, 3, 2, 0, 0}; {6, -1, 0, 6, 5, -4, 2, -3,

1, 0, 0, 0}; {-3, 3, 5, 0, -4, 1, -2, -4, -3, 4, 0, 0}; {-4, 0, 0, 6, 0, -5, -2, -4, -4, 5, 0, 0}; {0, 0, 8, 10, 0, 7, 2, 0, 4, 8, 6, 9}; {4, 1, 6, 5, -3, 5, -2, 2 5, 2, 0, 0}; {0, 0, 8, 11, 9, 4, 11, 2, 6, 5, 5, 10}, {0, 0, 9, 0, 5, 10, 10, 10, 3, 11, 5, 3}; {-4, 6, 1, 2, -4, 4, -3, -1, 2, -1, 0, 0}; {-1, 5,- 4, 6, 1, 6, 4, -4, -3, 3, 0, 0}; {0, 0, 9, 2, 3, 1, 9, 1, 10, 5, 6, 9}; {3, 3, 0, 5, -5, 4, -3, 2, 1, 6, 0, 0}; {-5, 2, 6, -5, -4, -2, 4, -3, 5, 3, 0, 0}; {0, 0, 9, 3, 10, 3, 4, 1, 4, 9, 10, 1}; {-5, 4, -2, 2, -3, -1, 3, 3, -1, -2, 0, 0}; {-2, -3, 5, -1, -2, 3, -4, 3, -5, 0, 0, 0}; {6, 5, 1, -5, -5, 0, 5, 1, 6, -1, 0, 0}-; {5, 4, 0, -5, 3, -4, 2, 5, -4, 0, 0, 0}; 1, 6, -2, 1, -3, -2, -5, 4, -5, -5, 0, 0}; {0, 0, 9, 5, 10, 0, 5, 1, 6, 6, 8, 4}; {3, -2, 2, 5, 5, 5, 6, 1, 6, 4, 0, 0}; {0, 0, 9, 5, 11, 11, 0, 4, 8, 3, 6, 7}; {-4, 3, -5, -1, -5, -4 6, 4, -5 -5, 0, 0}; {3, -5, -4, -3, 3, -2, -5, 5, 0, 3, 0, 0}; {0, -5, -1, 4, 4, 0, 3, 1, -3, -3, 0, 0}; {0, 5, -5, -2, -1, -3, -4, 3, -3, 3, 0, 0}; {0, 0, 9, 8, 2, 5, 0, 6, 7, 11, 9, 2}; {-2, -2, -5, 6, 0, 5, -1, 4, -3, -3, 0, 0}; {2, -2, 3, -2, 4, 5, 2, 2, 5, 5, 0, 0}; {3, -3, 0, 6, 5, 1, 4, 1, -3, -2, 0, 0}; {2, -2, 3, -1, 6, 5, 1, 2, -4, -1, 0, 0}; {-5, -1, 0, 4, -2, 5, 2, 2, -2, 2, 0, 0}, {4, -5, -5, -1, 4, -1, 2, 0, -2, 5, 0, 0}; {1, 3, 2, 6, 0, -5, -1, -1, 5, 3, 0, 0}; {-5, 2, 6, 3, 4, 6, -1, 0, -3, 6, 0, 0}; {6, -3, 2, 3, -3, 4, -3, -2, 6, 2, 0, 0}; {-4, 0, 2, 3 3, 0, 4, 6, 3, 1, 0, 0}; {0, 0, -10, 1, 8, 1, 4, 5, 10, 10, 4, 1}; {-4, 2, 6, 3, 4, 6, -1, 0, -3, 6, 0, 0}; {3, -2, 3, 2, -3, 2, 4, 5, -5, 1, 0, 0}; {0, 0, 10, 2, 3, 8, 9, 10, 6, 1, 7, 0 }; {2, -4, 0, -2, 6, 6, 1, -4, -2, 0, 0, 0}; {-1, -1, -3, 1, -5, 4, 1, -1, 5, -3, 0, 0}; {1, -4, 1, 0, 2, -2, 2, 5, -5, 4, 0, 0}; {4, -1, 4, 4, -1, 0, -4, 5, -2, 0, 0, 0}; {4, 0, 6, -5, 4, -5, -1, 4, 3, -2, 0, 0}; {1, 6, -3, -4, 2, 6, 2, -1, -2, 2, 0, 0}; {3, -1, 5, -5, 6, -1, 2, 1, 0, 4, 0, 0}; {0, 5, -4, -4, 1, 6, 1, -2, -3, 2, 0, 0}; {0, 0, 10, 5, 5, 10, 3, 9, 10, 10, 2, 9}; {5, 3, -1, 4, 4, -1, 4, -5, 5, -2, 0, 0 {3, 0, -5, 0, -5, -2, 1, 0, 3, 4, 0, 0}; {1, -1, -5, 2, -4, -3, -2, 4, -4, 0, 0, 0}; {0, 0, 10, 7, 3, 8, 3, 7, 6, 8, 11, 4}, {-3, 4, -3, 1, 5, 2, -1, 0, -2, -4, 0, 0}; {-3, 6, 1, -5, 1, 1, 1, 2, 5, -1, 0, 0 {5, -3, -1, 1, -2, 5, 2, 3, 0, 4, 0, 0}; {-5, 4, -1, 6, -3, 6, 5, 3, -5, -2, 0, 0}; {1, 0, -3, -4, 1, 5, -2, 5, -2, -3, 0, 0}, {0, 0, 10, 11, 0, 2, 6, 10, 8, 3, 10, 3}; {-2, 4, -4, 3, -4, -5, -1, -1, 3, 3, 0, 0}, {-4, 2, -5, 2, -3, 6, 5, -2, 0, 2, 0, 0}; - 1, 6, 0, -4, -4, 2, 6, -4, -2, 1, 0, 0}; {0, 0, 11, 1, 3, 9, 8, 5, 1, 6, 0, 8}; {6, 1, - 5, 4, 4, -1, 3, -5, -4, 0, 0, 0}; {-4, 2, -5, 3, 4, 6, 0, 0, -3, -5, 0, 0}; {0, 0, 11, 4, 1, 7, 8, 1, 3, 9, 0, 9}: {-1, 4, -4, -5, 1, 4, 2, -1, -3, 2, 0, 0}; {-1, 1, 2, -2, 2, -1, 3, -3, 6, 5, 0, 0}; {0, 0, 11, 6, 1, 0, 4, 7, 10, 5, 8, 4}; {-5, 2, -4, -2, 1, 3, -3, 5, 1, 1, 0, 0}; {-5, 3, -2, 1, -4, -1, 3, 3, -1, -2, 0, 0}; {-4, 4, 1, 3, -2, 1, 3, 2, 4, 5, 0, 0}; {3, -3, 2, 4, -3, 5, 3, 4,

-1, -2, 0, 0}; {0, 0, 11, 7, 8, 4, 11, 10, 2, 2, 9, 2}; {5, 2, -2, 3, 1, 1, -4, -2, 5, -3, 0, 0}; 6, 3, -1, 5, -5, 3, 6, 5, 5, -2, 0, 0}; {1, -4, 2, 6, -4, 3, 1, 0, -2, -3, 0, 0}, {-5, 4, 0, -5, -5, 5, -5, 2, 5, -2, 0, 0}; {2, -1, -5, 2, 6, 3, 2, 2, -5, -2, 0, 0}; {0, 0, 11, 9, 4, 9, 3, 9, 3, 4, 8, 8}; {5, 1, -4, 2, 4, -1, 1, 0, 3, 4, 0, 0}; {6, 0, 5, -3, 5, 5, 5, 3, -3, -4, 0, 0}; -5, 1, 6, 0, -4, 5, 5, -3, 0, 1, 0, 0}; {2, -2, 5, 1, 2, -3, 1, 6, -4, -1, 0, 0}; et {1, -4, 2, -3, -1, -2, -3, 0, 5, 6, 0, 0}; et {0, 0, 0, 0, 3, 6, 0, 10, 6, 3, 8, 1}; {0, 0, 1, 3, 3, 9, 6, 2, 4, 11, 2, 9}; {0, 0, 3, 0, 9, 4, 3, 3, 9, 1, 8, 0}; {0, 0, 3, 1, 10, 11, 8, 2, 6, 1, 2, 7}; {0, 0, 3, 1, 11, 6, 7, 1, 4, 11, 7, 11}; {0, 0, 3, 6, 10, 8, 8, 3, 11, 9, 0, 8}; {0, 0, 3, 7, 1, 4, 7, 6, 4, 0, 5, 2}; {0, 0, 4, 8, 8, 3, 9, 0, 7, 1, 10, 10}; {0, 0, 6, 5, 3, 5, 1, 5, 1, 8, 1, 2}; {0, 0, 6, 6, 1, 3, 4, 4, 5, 0, 6, 0}; {0, 0, 6, 8, 1, 3, 1, 4, 9, 5, 11, 8}; {0, 0, 7, 8, 8, 6, 2, 9, 6, 10, 3, 9}, {0, 0, 7, 8, 10, 9, 11, 2, 9, 1, 8, 4}; {0, 0, 8, 4, 4, 9, 3, 0, 5, 11, 2, 2}; {0, 0, 8, 5, 7, 10, 2, 10, 0, 11, 4, 11); {0, 0, 8, 6, 9, 3, 11, 3, 4, 0, 4, 5}; {0, 0, 9, 1, 3, 9, 9, 9, 3, 0, 5, 0}; {0, 0, 10, 0, 7, 11, 7, 4, 11, 11, 2, 5}; {0, 0, 10, 11, 2, 7, 8, 2, 10, 2, 8, 4}; et {0, 0, 11, 6, 5, 0, 8, 1, 0, 4, 10, 1}; et

l'unité de traitement est en outre configurée pour mapper la séquence {$f_n$} sur N sous-porteuses afin de générer un premier signal ; et une unité émettrice-réceptrice, configurée pour envoyer le premier signal.

6. Appareil de traitement de signal selon la revendication 5, dans lequel l'unité de traitement est en outre configurée pour :

mapper respectivement les N éléments de la séquence {$f_n$} sur N sous-porteuses consécutives, ou mapper respectivement les N éléments de la séquence {$f_n$} sur N sous-porteuses équidistantes.

7. Appareil de traitement de signal basé sur une séquence, comprenant :

une unité émettrice-réceptrice, configurée pour recevoir un premier signal transporté sur N sous-porteuses ; et

une unité de traitement, configurée pour obtenir N éléments dans une séquence {$f_n$}, dans lequel $f_n$ est un élément dans la séquence {$f_n$}, la séquence {$f_n$} est une séquence respectant une condition prédéfinie, la condition prédéfinie est $f_n = A \cdot x_n \cdot e^{2\pi j \cdot a \cdot n}$, une valeur de n est comprise dans une plage allant de 0 à N-1, A est un nom-

bre complexe non nul, $\alpha$ est un nombre réel,

$$j = \sqrt{-1}$$

, pour un élément $X_n$, $x_n = u \cdot e^{2\pi j \cdot s_n / M}$, u est un nombre complexe non nul, et un ensemble qui est constitué de {$S_n$} constitué d'un élément $S_n$ comprend au moins une des séquences dans un premier ensemble de séquences, dans lequel

les séquences dans le premier ensemble de séquences comprennent tout ou partie des séquences suivantes :

{-2, 4, -2, 4, 0, 2, 2, 0, 5, 5, 0, 0}; {-1, 6, 1, -4, -2, 4, -5, -5, 6, -5, 0, 0}; {3, -3, 3, -3, 0, -2, 2, 0, -5, -5, 0, 0}; {2, -4, 2, -4, -1, -2, -2, -1, -5, 6, 0, 0}; {-4, 2, -4, 3, -1, 1, 2, 1, 4, 5, 0, 0); {0, 6, 0, -5, -2, -4, -3, -1, 6, 6, 0, 0}; {0, 6, 0, -5, -2, -3, -3, -1, 6, 6, 0, 0}; {-1, 5, -1, 6, -2, -3, -3, -1, 5, 5, 0, 0}; {-4, 2, -4, 4, -4, -5, -4, -2, 5, 5, 0, 0}; 1, -5, 3, -5, 6, -5, -3, 5, 5, 0, 0}; {4, -2, 4, 0, -4, -1, 0, -1, 3, 4, 0, 0}; {0, 4, -4, 2, -3, -2, -3, 4, 1, -2, 0, 0}; {-1, 3, -5, 1, -4, -3, -3, 4, 1, -2, 0, 0); {0, 5, -2, 5, 2, 4, 3, 1, 3, -4, 0, 0}; {-3, 1, 5, -1, -5, -4, -5, 3, 0, -3, 0, 0}; {3, -3, 3, -1, 0, 6, -3, -3, -5, -4, 0, 0}; {1, 6, -1, 6, 6, 0, 2, 0, -3, -1, 0, 0}; {5, -2, 3, -2, 0, -1, 0, 0, -5, 6, 0, 0}; {-3, 3, -3, 5, -4, -4, -4, -2, 5, 5, 0, 0}, {-3, 0, 3, 3, 3, 1, 3, -5, 4, 1, 0, 0}; {-1, 4, 3, 5, 4, -2, 1, 0, -3, -2, 0, 0}; {3, -1, -5, 5, 1, -4, 0, 1, 4, -1, 0, 0}; {2, -2, 6, 6, 1, -5, 0, 1, 4, -1, 0, 0}; {0, -5, 2, 2, -5, 1, 4, 4, 6, 1, 0, 0}; {1, -3, 5, 6, 0, -5, -1, 1, 3, -1, 0, 0}; {-3, 4, -1, -1, 5, -1, 3, 4, 5, 0, 0, 0}; {-5, 1, -5, 6, -1, 4, -5, -5, -5, 1, 0, 0}; {-2, 5, 0, 0, 6, 0, 3, 4, 5, 0, 0, 0}; {-5, 1, -5, 6, -1, 5, -5, 6, -5, 1, 0, 0}; {3, -3, 3, 3, -4, 2, 5, 5, 6, 0, 0, 0}; {-3, 3, -3, -3, 4, -2, -5, -5, 6, 0, 0, 0}; {4, -3, 2, 2, -4, 1, -2, -3, -5, 0, 0, 0}; {5, -1, 5, 6, 1, -5, 5, 6, 5, -1, 0, 0}; {5, -1, 5, 6, 1, -4, 5, 5, 5, -1, 0, 0}; {3, -4, 1, 1, -5, 1, -3, -4, -5, 0, 0, 0}; {-1, 3, -5, 6, 0, 5, 1, -1, -3, 1, 0, 0}; {0, 5, -2, -2, 5, -1, -4, -4, 6, -1, 0, 0}; {-2, 2, 6, 6, -1, 5, 0, -1, -4, 1, 0, 0}; {-2, 2, 6, 6, 0, 5, 1, -1, -3, 1, 0, 0}; {-3, 1, 5, 5, -1, 4, 0, -2, -4, 1, 0, 0}; {-3, 1, 5, 5, -1, 4, 0, -1, -4, 1, 0, 0}; {-2, 3, -4, -3, 4, -2, -5, -5, 6, -1, 0, 0}; {3, 0, -3, 3, -3, -1, -3, 5, -4, -1, 0, 0}; {4, -2, 4, -4, 4, 5, 4, 2, -5, -5, 0, 0}; {-5, 2, -3, 2, 0, 1, 0, 0, 5, 6, 0, 0}; {-1, 5, -1, 3, 5, 1, 1, 6, 5, -1, 0, 0}; {0, -5, 2, -5, -2, -4, -3, -1, 3, 4, 0, 0}; {4, -2, 4, -3, 6, 6, 4, 3, -5, 0, 0, 0}; {2, -4, 2, -5, 4, 5, 3, 2, -5, -5, 0, 0}; {-3, 3, -3, 2, 0, -5, 4, 3, -1, 0, 0, 0}; {0, 6, 0, 5, 3, 4, 3, 1, 6, 6, 0, 0}; {6, 0, 6, -1, 2, 0, -1, 0, -4, -5, 0, 0}; {-4, 4, 1, -4, -4, 0, 4, 0, 3, -1, 0, 0}; {-1, 5, 0, 5, 3, 3, 2, 1, 6, -5, 0, 0}; {-3, 2, -4, 0, -2, -4, -5, 4, -4, -4, 0, 0}; {-1, 6, 2, -4, -2, -3,

4, -5, -1, 2, 0, 0}; {5, -2, 4, -3, 5, 6, 5, 3, -5, -5, 0, 0}; {-1, 5, 0, 6, -3, -4, -4, -2, 6, 6, 0, 0}; {-5, 1, -4, 3, -5, 6, -5, -3, 5, 5, 0, 0}; {5, -3, 2, -5, -3, 6, 3, -4, 6, 0, 0, 0}; {3, -5, 0, 5, -4, 5, 2, -5, 5, 0, 0, 0}; {0, 5, -1, 5, 5, -2, -2, 2, 2, 2, 0, 0}; {-5, 0, 6, 0, 2, 0, 0, 1, -4, -5, 0, 0}; {-4, 1, -5, 3, -5, 6, -4, -3, 5, 5, 0, 0}; {-3, 1, 6, 1, -5, -4, -4, 3, 1, -2, 0, 0}; {6, -3, 1, -5, 1, 0, 1, 6, 3, 0, 0, 0}; {-5, -1, 4, 0, 3, -3, -4, 2, 0, -2, 0, 0}; {5, 0, -4, -4, 2, -3, 1, 2, 4, -1, 0, 0}; {3, -2, 6, 6, 1, -4, 0, 1, 4, -1, 0, 0}; {-1, 5, 0, 0, 5, 0, 4, 4, 5, 0, 0, 0}; {5, -1, 6, 6, -1, -2, 4, 6, 2, 0, 0, 0}; {-1, 5, 0, 0, 6, 0, 3, 4, 5, 0, 0, 0}; {-1, 4, -2, -2, 4, -1, -4, -4, 6, -1, 0, 0}; {-5, 1, 4, 3, -3, 3, -1, -2, -4, 0, 0, 0}; {-3, 1, 6, 5, -1, 4, 0, -2, -3, 1, 0, 0}; {-2, 3, -3, -3, 4, -2, -5, -5, 6, -1, 0, 0}; {-5, -1, 4, 3, -2, 3, -1, -2, -4, 0, 0, 0}; {-4, 1, -5, -5, 3, -3, 6, 6, 6, -1, 0, 0}; {6, -2, 3, 2, -3, 2, -1, -3, -4, 0, 0, 0}; {3, 6, -2, -3, 3, -5, 3, 1, -2, 2, 0, 0}; {-5, -1, 4, 4, -3, 3, -1, -2, -4, 1, 0, 0}; {6, -2, 3, 3, -3, 3, -1, -2, -4, 0, 0, 0}; {5, -3, 2, 2, -4, 2, -2, -3, -5, 0, 0, 0}; {5, 1, -2, 4, -2, 0, -3, 6, -4, -1, 0, 0}; {3, -2, 6, -1, 4, 5, 1, -2, -2, 0, 0, 0}; {5, -1, -5, -1, 1, 3, -3, 3, 3, 1, 0, 0}; {4, 1, 0, -5, 1, 6, 2, 2, 5, -3, 0, 0}; {3, -1, -3, 3, -3, -1, 6, -4, -5, -1, 0, 0}; 1 , -3, -5, 1, 5, -2, 6, -5, 6, ---3, 0, 0}; {2, -5, 2, -5, 4, 5, 3, 2, -5, -5, 0, 0); {-1, 3, -3, 1, 0, 4, 1, -5, 6, 2, 0, 0}; {-2, 2, -4, 0, -1, 3, 1, 6, 5, 3, 0, 0}; {5, -1, -5, 2, -5, -1, 3, 5, 4, 4, 0, 0}; {5, -1, -5, 2, -5, -1, 3, 6, 5, 4, 0, 0}; {0, 4, -2, 3, 6, 4, 0, 6, 4, 0, 0, 0}; {-3, 3, -1, 6, -5, -2, -4, -2, 3, 3, 0, 0}; {-4, -1, 4, -3, -1, -5, 3, -4, 5, 0, 0, 0}; {-5, -2, 3, -4, -2, -5, 4, -4, 6, 0, 0, 0}; {0, 4, -2, 4, -2, -3, -1, -1, 4, 3, 0, 0}; {6, -3, 2, -5, 4, -5, -5, -3, 6, 3, 0, 0}; {6, -2, 4, -2, -4, 1, 0, 4, 4, 2, 0, 0}; {6, -2, 4, -2, -3, 2, 1, 5, 4, 2, 0, 0}; {4, -3, 4, 0, 0, 6, -5, -1, 1, -1, 0, 0}; {-1, 2, -5, 1, 0, 4, 3, 6, 5, 3, 0, 0}; {3, 5, -3, 2, 3, -1, 6, -1, -5, 1, 0, 0}; {-2, 1, 6, 0, -5, -4, -2, -2, 4, 2, 0, 0}; {-3, 2, -3, 6, -3, 3, 4, -1, -2, -3, 0, 0); {1, 3, -5, 1, 2, -3, 4, -3, 5, 0, 0, 0}; {0, 2, 6, 0, 1, -3, 4, -3, 5, 0, 0, 0}; {-3, -1, 3, -2, 6, -2, -5, -3, -5, 5, 0, 0}; {0, 3, -4, -5, 1, 6, 1, 0, -3, 1, 0, 0}; {-4, 3, 0, 4, -4, -3, 4, 0, 0, -1, 0, 0}; {-4, 4, 2, -5, 0, 3, -2, -5, -2, 0, 0, 0}; {-5, 3, 1, 6, -1, 2, -2, -5, -2, 0, 0, 0}; {5, 1, 0, 5, 2, 2, -3, 6, -2, 0, 0, 0}; {-4, 4, 3, -3, 3, -5, 4, 5, 5, -4, 0, 0}; {4, -1, -3, 3, -3, -1, -5, -4, 6, -2, 0, 0}; {-1, 5, 2, -4, -4, 1, 5, -1, 1, 0, 0, 0}; {-3, 3, 0, 6, -5, -1, 5, -2, 3, 2, 0, 0}; {2, 6, 1, 6, 6, -1, -2, 4, 3, 1, 0, 0}; {-1, 2, -4, 0, 0, 4, 2, -5, 5, 2, 0, 0}; {-2, 4, 1, -4, 3, -5, -1, 4, 4, 3, 0, 0}; 5, -1, 6, -1, -3, 1, 2, -5, 4, 2, 0, 0}; {4, -4, 3, -4, -5, 0, -1, 4, 4, 1, 0, 0}; {4, -4, 3, -4, -5, 0, -1, 4, 4, 2, 0, 0}; {2, 5, -1, 3, 1, 5, 3, -4, 6, 3, 0, 0}; {1, 4, -2, 3, 1, 5, 3, -5, 6, 3, 0, 0}; {3,

-4, 4, -1, -1, 5, 6, -1, 1, -1, 0, 0); {-2, 1, -5, 0, -1, 3, 2, 6, 5, 3, 0, 0}; {-2, 4, 1, -3, 3, -5, 0, 3, 3, 3, 0, 0}; {6, -2, 5, -1, 5, 5, -4, -4, 5, 5, 0, 0}; {5, -3, 4, -2, 5, 5, -5, -4, 5, 5, 0, 0); {5, -2, 6, 1, 0, 6, -5, 0, 2, 0, 0, 0}; {1, 4, -2, 3, 0, 4, 4, -4, 6, 3, 0, 0}; {0, 2, -5, 0, 1, -3, 4, -3, 5, 0, 0, 0}; {-2, 0, 5, -2, 0, -4, 4, -3, 6, 0, 0, 0}; {5, -5, 0, 6, 3, -5, 5, -4, 6, 5, 0, 0}; {-5, -2, 4, -1, 5, -4, -5, 3, 0, -2, 0, 0}; {-3, -1, 4, 2, 4, -1, 6, 1, 0, 4, 0, 0}; {5, -5, 1, -1, 2, -3, 4, -1, -1, 3, 0, 0}; {-2, -5, --4, 2, -3, 2, 0, 2, 3, -5, 0, 0}; {0, -5, 6, -1, 3, 6, 1, -3, -1, -1, 0, 0}; {5, 0, -1, 5, 5, -3, 3, -2, 1, 0, 0, 0}; {1, -4, -5, 1, 3, -5, 1, -3, 0, -1, 0, 0}; {-5, 2, 1, -5, -2, 3, -3, 6, -2, 0, 0, 0}; {0, 6, 4, -2, -4, 1, 5, -1, 1, 1, 0, 0}; {-1, 4, 1, -5, -3, 3, 4, -1, 0, -2, 0, 0}; {-2, 4, 2, -3, 1, 5, 4, 5, -1, 2, 0, 0}; {-3, -1, 5, -2, -1, -5, 3, -4, 5, -1, 0, 0}; {-5, -3, 3, -4, -2, 6, 1, -5, 4, -1, 0, 0); {6, -5, 0, 4, 5, 0, -5, -1, -5, 1, 0, 0}; {0, 4, 0, -5, -1, 4, 5, 1, -1, -3, 0, 0}; {2, -3, -3, 3, 5, 1, -4, 1, -2, -1, 0, 0); {-3, 3, 2, -4, -3, 5, -1, 3, 0, 0, 0, 0}; {-4, 2, 1, --5, -4, 4, -2, 2, 0, 0, 0, 0}; {-3, -1, 6, -4, 6, -2, 5, -1, -4, 5, 0, 0}; {1, -4, -4, 3, 2, 6, 0, -3, 0, -1, 0, 0}; {-1, 5, 4, -2, -4, 0, 5, 0, 2, 1, 0, 0}; {0, -5, -5, 2, 1, 6, 0, -4, -1, -1, 0, 0}; {-1, 6, 6, 1, 1, 6, 0, -4, -1, -1, 0, 0}; {-4, 2, 1, -5, 6, -1, 3, -2, 1, 0, 0, 0}; {-3, 4, 4, -1, -1, 5, -2, 6, -2, -2, 0, 0); {-4, 3, 3, -2, -2, 4, -2, 6, -2, -1, 0, 0}; {-4, 3, 3, -2, -1, 4, -2, -5, -1, -1, 0, 0}; {-5, 1, 0, 6, 6, -2, 4, -1, 1, 0, 0, 0}; {-4, 3, 3, -2, -1, 4, -1, -5, -1, -1, 0, 0}, {3, 5, 0, 3, -4, 4, 2, -5, 5, -1, 0, 0}; {-3, 3, 2, -3, 6, -3, 3, 0, 1, -1, 0, 0); {1, 4, 0, -5, -1, 4, 5, 1, -1, -4, 0, 0}; -3, -2, 4, -2, -1, -5, 2, -5, 4, -1, 0, 0}; {-4, 2, 2, -5, -3, 4, -2, 3, 0, 0, 0, 0}; {5, -3, -5, -1, -3, 4, -4, -3, 5, 4, 0, 0); {-5, 3, 5, 1, 3, -4, 4, 3, -5, -4, 0, 0}; {6, 0, 0, 6, -5, 3, -2, 2, -1, 0, 0, 0}; {6, 0, 0, 6, -5, 3, -2, 3, -1, 0, 0, 0); {-4, 2, 2, -4, 6, -2, 4, -1, 1, 1, 0, 0}; {-5, 1, 1, -5, 5, -3, 3, -2, 1, 1, 0, 0}; {6, 0, 0, 6, 5, -3, 2, -2, 1, 0, 0, 0}; {6, 0, 0, 6, 5, -3, 3, -2, 1, 0, 0, 0}; {4, -2, -2, 5, 3, -4, 2, -3, 0, 0, 0, 0}; {6, 3, -5, 2, -4, 6, 5, 3, 6, -5, 0, 0}; {-3, -5, 0, -3, 4, - 4, -2, 5, -5, 1, 0, 0}; { -4, 3, 5, -1, -5, 2, 6, -5, 0, 0, 0, 0}; {4, -2, -1, 5, 4, -4, 2, -2, 0, 0, 0, 0}; {-1, 4, 4, -3, -2, 6, 0, 3, 0, 1, 0, 0}; {0, -5, -3, 4, -4, 5, 1, -5, -5, -2, 0, 0}; {5, -2, -2, 3, 0, 4, -4, 3, 1, 2, 0, 0}; {0, 6, -5, 2, 0, 5, 0, -4, -1, 0, 0, 0}; {-2, 3, 3, -3, -5, -1, 4, -1, 2, 1, 0, 0}; {3, -4, -4, 2, -2, 1, -5, 3, 1, 1, 0, 0}; {2, -4, -3, 4, 1, 6, 1, -3, -1, 0, 0, 0}; {0, 4, 3, -4, 3, 6, -1, 6, 4, 2, 0, 0}; {-5, 5, -1, 1, -2, 3, -4, 1, 1, -3, 0, 0}; {-1, -3, 3, -4, 6, 3, -2, 0, -5, -1, 0, 0}; {-4, 4, -4, 1, -5, -4, 6, 4, -5, .....5, 0, 0}; {6, 5, 0, -4, -5, 0, 5, 1, 5, -1, 0, 0}; {5, 3, -3, 4, 2, 6, -1, 5, -4, 1, 0, 0}; {3, 1, -5, 2, 1, 5, -3, 4, -5, 1, 0, 0}; {4, -1, 2, 5, 0, -1, --3,

-5, -4, -3, 0, 0}; {3, -2, 1, -5, 1, -2, -4, 6, -5, -3, 0, 0}; {-4, 1, 2, -5, -4, 4, -2, 5, 0, 1, 0, 0}; {2, -4, -2, 4, 0, 5, -3, -3, 1, -1, 0, 0}; {5, -2, -1, 5, 2, -3, 3, 6, 2, 0, 0, 0}; {2, 5, 4, -2, 3, -2, 0, --2, -3, 5, 0, 0}; {-5, -1, 0, -5, 2, -2, 3, 6, 2, 0, 0, 0}, {3, 1, -4, -2, -4, 1, 6, -1, 0, -4, 0, 0}, {2, -1, 5, -2, -5, 5, 0, 1, -4, -1, 0, 0}; {2, 0, -5, 2, 0, 4, -4, 3, 6, 0, 0, 0}; {0, -2, 5, 0, -1, 3, -4, 3, -5, 0, 0, 0}; {4, -1, 3, -4, 2, -1, -4, 6, -5, -4, 0, 0}; {2, -4, -1, 3, -3, 5, 0, -3, -3, -3, 0, 0}; {4, -2, 1, 6, 0, -1, -3, -5, -4, -3, 0, 0}; {-1, 5, -4, 1, -5, 3, -1, -4, -4, -3, 0, 0}; {-2, 4, -5, 0, 6, 2, -1, -4, -4, -3, 0, 0}; {3, -3, 0, 6, 5, 1, 5, 2, -3, -2, 0, 0}; {5, 2, -4, 5, 1, 5, -4, 4, 6, 0, 0, 0}; {3, 3, 0, 1, -5, 0, 6, 2, -4, -4, 0, 0}; {4, -4, -3, 3, -3, 5, -4, -5, -5, 4, 0, 0); {-1, 3, 5, -1, 5, 2, 6, 5, 6, 3, 0, 0}; {-3, 1, 3, -3, 3, 1, 6, 4, 5, 1, 0, 0}; {-4,-1, 0, 5, -1, 6, -2, -2, -5, 3, 0,0}; {-5, -1, 1, -4, 2, - 1, 3, 6, 4, 1, 0, 0}; {5, -3, -1, 6, 1, -2, 2, 5, 2, 0, 0, 0}; {4, -4, -2, 5, 0, -3,2,5,2, 0, 0, 0}; {4, -3, 0, -4, 4, 3, -4, 0, 0, 1, 0, 0}; {4, -2, 2, -1, -1, 6, -1, -3, -5, -4, 0, 0}; {0, -3, 4, 5, -1, 6, -1 , 0, 3, -1, 0, 0};. {0, -2, 6, 0, -1, 3, -4, 3, -5, 0, 0, 0}; {-1, -3, 5, -1, -2, 3, -4, 3, -5, 0, 0, 0}, {-5, 2, -5, -1, 6, -5, 6, 4, -5, -5, 0, 0}; {-5, 3, -3, 2, -2, 0, 1, 0, 4, 5, 0, 0}; {-3, -5, 3, -2, -3, 1, 6, 1, 5, -1, 0, 0}; {-3, 5, -1, 5, -1, 1, 2, 1, 4, 5, 0, 0}; {-4, 4, -2, 4, -2, 1, 2, 1, 4, 5, 0, 0}; {-5, 3, -3, 3, -2, 0, 1, 0, 4, 5, 0, 0}; {4, -1, 4, -3, 4, 5, 5, 3, 6, 6, 0, 0}; {1, -4, 1, 6, 1, 2, 6, 5, 1, -1, 0, 0}; {2, -3, 2, -5, 3, 4, 4, 2, 6, 6, 0, 0}; {5, 2, -3, 4, 2, 5, -4, 4, 6, 0, 0, 0}; {4, 1, -4, 3,1, 5, -3, 4, -5, 0, 0, 0}; {-5, 3, -3, 5, 3,-5, -3, 4, 6, 0, 0, 0}; {-2, 6, 0, -4, 4, -5, -2, 5, -5, 0, 0, 0}; {3, -2, 3, -1, 0, 6, -2, -3, -5, -4, 0, 0}; {0, -5, 0, -4, 1, 3, 2, 1, 5, 5, 0, 0}; {-1, 6, 0, -4, 3, 2, 2, -4, -1,2, 0, 0}; {6, 1, -5, 3, -5, 6, -5, -2, 3, 4, 0, 0}; {-1, 5, -2, 6, -1, 2, 2, 0, 4, 4, 0, 0}; { 3, 2, 6, 1, -4, -5, -1, 2, 2, 0, 0, 0}; {-5, 1,2, -4, 2, 0, 3, 6, 4, 1, 0, 0}; {5, -1, 4, 1, -2, -3, 3, -4, -2, -1, 0, 0}; {0, -4, 3, 3, -4, -4, 0, 4, 0, 1, 0, 0}; {-5, 3, -2, -2, 4, -2, 2, 3, 5, 0, 0, 0}; {6, 2, -3, -3, 3, -3, 1, 2, 4, 0, 0, 0}; {5, 1, -4, -4, 3, -3, 1, 2, 4, -1, 0, 0}; {6, 2, -3, -2, 3, -2, 1, 3, 4, 0, 0, 0}; {4, -1, 5, 5, -3, 3, 6, 6, 6, 1, 0, 0}; {5, 1,-4, -3, 2, -3, 1, 2, 4, 0, 0, 0 {5, 1, -4, -3, 3, -3, 1,2, 4, 0, 0, 0}; {2, -3, 3, 3, -4, 2, 5, 5, 6, 1, 0, 0}; {1, -4, 2, 2, -4, 1, 4, 4, 6, 1, 0, 0}; {1, -5, 0, 0, 6, 0, -3, -4, -5, 0, 0, 0}; {-5, 1, 6, 6, 1, 2, -4, 6, -2, 0, 0, 0}; {1, -5, 0, 0, -5, 0, -4, -4, -5, 0, 0, 0} ; {-3, 2, 6, 6, -1, 4, 0, -1, -4, 1, 0, 0}; {-5, 0, 4, 4, -2, 3, -1, -2, -4, 0, 0, 0}; {6, -1, 3, 3, 2., 3, -1, -3, -4, 1, 0, 0}; {-1, -3, 6, 0, 3, -1, 2, 3, 3, -4, 0, 0}; {6, 3, 1, 5, -1, 0, -1, 6, -3, 0, 0, 0}; {6, 2, -3, 2, -4, -1, 3, 4, -1, -1, 0, 0}; {3, -2, 4, -4, 3, 4, 5, 3, 6, 6, 0, 0}; {4, -1, 5, -3, 5, 6, 4, 3, -5, -5, 0, 0};

{1, -4, 2, 6, 2, 3, 4, 2, 6, 6, 0, 0}; {1, -4, 2, -5, 3, 4, 3, 2, 6, 6, 0, 0}; {-2, 5, -1,4, 1, 2, 2, 1, 5, 6, 0, 0}; {5, —1, 4, -3, 5, 6, 5, 3, -5, -5, 0, 0}; {-5, 3, -2, 5, 3, 6, -3, 4, 6, 0, 0, 0}; {-3, 4, -2, 4, -1, 1, 2, 1, 4, 5, 0, 0}; {-5, 2, -4, 2, -2, 0, 1, 0, 4, 5, 0, 0}; {-3, 5, 0, -5, 4, -5, -2, 5, -5, 0, 0, 0}; {6, 0, 5, -1, -5, -5, 5, 4, -4, -4, 0, 0}; {2, -4, 1, -5, 3, 4, 4, 2, 6, 6, 0, 0}; {2, -4, 1, -5, 4, 4, 4, 2, 6, 5, 0, 0 {-1, 6, 0, -5, -2, -4, -3, -1, 5, 5, 0, 0 {-1, 6, 0, -5, -2, -3, -3, -1, 5, 5, 0, 0}; {-4, 3, -3, 4, -4, -5, -4, -2, 5, 5, 0, 0}; {-5, 2, -4, 3, -5, 6, -5, -3, 5, 5, 0, 0}; {-5, 2, -4, 3, -4, -5, -5, -1, 2, 4, 0, 0}; et {-2, 5, -1, 6, -1, 2, 3, 1, 4, 5, 0, 0};

{-3, 2, -5, 0, -1, -3, -5, 5, -3, -4, 0, 0}; {6, 0, 6, 0, 4, -5, -4, 2, 0, -2, 0, 0}; {0, 0, 0, 1, 10, 8, 5, 0, 4, 9, 10, 2}, 31, -5, 1, -3, -5, -1, -1, 6, -5, 1, 0, 0}; (-4, 1, 6, 1, -2, 6, 0, 2, 4, 3, 0, 0}; {-3, 1, 5, 0, -5, -3, -4, 3 0, -2, 0, 0}; {4, 5, 6, -2, 3 -1, 4, -1, -2 4, 0, 0}; {-4, -1, 2, -4, 6, -2, -4, -5, -4, 3, 0, 0 }; {-2, 3, -4, 4, 5, 6, 1, 1, -3, -5, 0, 0}, {0, 0, 0, 4, 8, 11, 9, 6, 10, 5, 0, 11 }; {2, -4, 2, 1, 6, 4, -5, 1, 3, 1, 0, 0}; {5, 3, 1, 5, 1, 3, -2, 5, 6, -3, 0, 0}; {4, 6, -4, 4, -3, 6, 0, 6, 6, 3, 0, 0}; {-4, 0, 4, 3, -2, 3, -1, -2, -5, 0, 0, 0}; {-5, -5, -5, 2, 6, -2, 6, 4, -3, 6, 0, 0}; {-2, -4, 6, 0, 5, -3, -5, 3, -4, -1, 0, 0}; 11, -2, -5, 0, 5, 0, 3, 2, 4, 6, 0, 0}; 2, -3, 4, -4, -5, 6, -1, -1, 3, 5, 0, 0}; {4, 0, -4, 2, 1, 4, -4, 3, 5, 0, 0, 0}; 3, -2, 5, -2, 0, -2, -3, 3, 3, -2, 0, 0}; {5, -1, 5, -2, 0, 0, -1, 0, -4, 6, 0, 0}; {6, 1, -3, 3, -4, 0, 4, 6, 6, 5, 0, 0}; {6, 0, -5, 1, 0, 2, 0, 0, 5, 5, 0, 0}; {-1, 6, 2, -2, 3, -4, 0, 3, 3, 3, 0, 0}; {-1, 5, 0, -5, 3, 2, 2, -5, -2, 1, 0, 0}; {1, 6, 0, -5, 4, -2, 0, 3, 3, 3, 0, 0}; {0, 0, 1, 3, 11, 7, 11, 4, 5, 0, 0, 7}; {6, -3, 1, -5, -2, -5, 3, -4, 6, 1, 0, 0}; {0, 2, 5, -2, 5, 3, 3, -3, 4, 0, 0, 0}; {-4, 1, -5, 4, -4, -5, -4, -2, 5, 4, 0, 0}; {2, 4, -5, 1, 5,0, -5, 5, 3, -1, 0, 0}; {0, 0, 1, 5, 9, 2, 10, 3, 0, 8, 4, 4}; {-2, -1, 1, -5, 3, 6, 2, 0, -1, 6, 0, 0}; {0, 0, 1, 6, 3, -1, 4, 6, 1, 5, 0, 0}; {-5, 1, -4, -5, -1, 5, -5, -5, 4, 2, 0, 0}; {1, -5, 2, 1, 5, 0, 1, -3, -5, -4, 0, 0}; {-4, 0, 5, 2, -3, -4, 4, -2, 1, 1, 0, 0}; {0, 0, 1, 6, 11, 3, 10, 7, 4, 11, 2, 1}; {5, -1, 6, 6, 5, 2, -5, 4, 6, -4, 0, 0}; 12, -5, 5, -4, 4, 6, 1, 6, -4, -4, 0, 0}; {-4, 3, -1, 0, 6, 6, -1, 3, -1, -1, 0, 0}; {0, 0, 1, 9, 0, 1, 6, 1, 8, 8, 5, 0}; {0, 0, 1, 9, 2, 5, 4, 8, 5, 1, 0, 6}; {-1, -5, 4, -4, 3, 5, 0, 6, -5, -1, 0, 0}; {0, 0, 1, 10, 1, 8, 11, 3, 2, 8, 7, 2}; {2, -4, 3, -5, 5, 5, -2, 0, 4, 4, 0, 0}; {2, -4, 3, -5, -5, 5, -1, 0, 3, 4, 0, 0}; {0, 0, 2, 0, 8, 9, 6, 10, 3, 9, 9, 2}; {-3, 1, -5, -2, -2, 3, -1, 6, 5, 1, 0, 0}; {3, -4, 3, -4, 5, 5, 2, 2, -4, -3, 0, 0}; {-1, 0, 3, 4, -1, -5, 2, -5, 2, 3, 0, 0}; {-5, 0, -5, 1, 3, 4, -4, 2, 1, 0, 0, 0}; {4, -5, 0, 4 4, 2, 6, 3, -4, 6, 4, 0, 0); {0, 4, -2, 4, -3, -4, -1, -2, 6, 5, 0, 0}; {5, -4, 1, 6, 1, -1, 1, 0, 6, 3, 0, 0};

{-1, 6, 3, 1, 6, -1, --2, 0, -5, -1, 0, 0}; {3, 6, 1, 5, 0, -2, 0, -2, -4, -5, 0, 0}; {3, -3, 5, 2, 2, -3, 1, -5, -3, -1, 0, 0}; {4, -5, 0, -5, -4, 0, 2, 1, 5, 1, 0, 0}; {-3, 0, 5, 0, -5, -3, -5, 3, 0, -2, 0, 0}; {0, 0, 2, 7, 6, 4, 11, 8, 5, 9, 4, 7}; {-3, 0, 5, 2, -5, 3, -1, -2, 2, 2, 0, 0}; {-1, -1, 1, -4, 6, -3, 3, -2, -1, 5, 0, 0}; {3, 6, -1, -2, 3, -5, 3, 1, -2, 2, 0, 0}; {3, -1, -3, 1, 2, 5, 3, -5, 1, 4, 0, 0}; {0, 0, 2, 10, 4, 0, 11, 9, 6, 0, 3, 5}; {4, -2, 6, -3, -4, 6, 1, 0, 3, 6, 0, 0}, {-1, 0, 3, 1, 0, -5, -2, 5, 1, 6, 0, 0}; {0, 0, 2, 11, 10, 4, 6, 9, 3, 8, 2, 9}; {0, 0, 2, 11, 11, 5, 6, 2, 5, 10, 6, -1}; {-5, -2, 4, 4, -2, 3, 0, -2, -4, 0, 0, 0}; {6, 6, -3, -5, 3, -2, 2, -4, 3, 5, 0, 0}; {0, -4, -5, 1, -5, -2, 5, -4, -5, -1, 0, 0}; {-4, 4, 3, -2, 1, 5, -1, -4, -1, -2, 0, 0}, {2, -5, 3, -4, 3, 3, 6, -5, 4, 5, 0, 0}; {0, 0, 3, 3, 7, 1, 5, 3, 1, 11, 7, 11}; {0, 0, 3, 3, 11, 8, 5, 7, 3, 6, 11, 4}; {1, 6, 2, -4, -2, 0, -2, -1, 4, 3, 0, 0}; {0, 0, 3, 4, 11, 1, 7, 10, 5, 11, 6, 3}; {2, -2, -3, -5, 0, 5, -4, -4, 1, -3, 0, 0}; {-3, 5, 4, 3, -3, 2, 5, -5, 0, -3, 0, 0}; {0, 0, 3, 6, 5, 2, 7, 4, 3, 1, 7, 0}; {-3, 1, -4, 3, 6, -2, -3, 5, 1, -1, 0, 0}; {-1, 2, -4, 2, -4, 6, 1, 2, -2, -2, 0, 0}; {-1, 2, -4, 2, -4, -4, -1, -2, 4, 2, 0, 0}; {0, 0, 3, 8, 2, 2, 9, 7, 6, 2, 6, 3 {0, 0, 3, 8, 10, 7, 4, 3, 8, 4, 8, 6}; {3, 2, 4, -3, 6, — 1, 5, 0, 1, 5, 0, 0}; {2, 1, 3, -4, 5, -2, 5, 0, 1, 5, 0, 0}; {....s, 3, 2, 5, 3, 0, 4, -3, 5, -4, 0, 0}; {-3, 0, 6, 5, 0, 2, -4, 4, -1, 1, 0, 0}; { 0, 0, 4, 0, 6, 1, 9, 7, 6, 2, 5, 8}; {-2, 1, -4, -4, 4, -4, 3, -1, -4, -2, 0, 0}; {0, 0, 4, 1, 8, 3, 5, 3, 2, 9, 11, 4}; {5, 1, 1, 6, -1, 2, -2, -5, -3, -3, 0, 0}; {-5, 4, 5, -1, 6, -5, 1, 5, 5, -2, 0, 0}; {6, 3, 4, 0, 6, 4, -2, 4, 6, -2, 0, 0}; {-5, 6, -3, -5, 3, -1, 2, -2, 3, 6, 0, 0}; {-2, 2, -2, 1, 5, -2, -2, 6, 4, -1, 0, 0}; {-5, -1, -5, -2, 4, -1, -4, 4, 5, 6, 0, 0 {6, 6, -2, -3, 4, -2, 5, -3, 3, 3, 0, 0}; {3, 3, -5, -5, 1, -3, 3, -4, 2, 3, 0, 0}; {1, 4, 1, 4, -3, -3, 0, -2, 6, 2, 0, 0 }; {6, 1, 0, -2, 3, -5, -2, -3, 2, -2, 0, 0}; {3, -5 , 3, -1, -5, 6, 2, -2, 0, 0, 0}; {0, 1, 6, -1, 6, 3, 4, -1, -2, 2, 0, 0}; (0, 0, 4, 8, 6, 2, 2, 11, 3, 4, 0, 5}; {-1, 6, 5, 4, -2, 1, -2, 0, 1, -4, 0, 0}; {6, -4, 2, -4, -1, 4, 1, -5, 3, 0, 0, 0}; {0, 4, 0, -4, 2, -2, -2, 6, -4, 0, 0, 0}; {0, 0, 4, 8, 10, 3, 11, 4, 2, 2, 11, 6}; {-3, 1, -3, 6, -4, 5, -1, -5, -4, 0, 0}; { 1, 3, -3, 4, 6, -3, 2, 0, 5, 1, 0, 0}; {0, 0, 4, 10, 2, 4, 7, 6, 10, 7, 5, 3}; {1, 4, -1, -3, -1, -4, 5, -2, -2, -5, 0, 0}; {0, 0, 4, 11, 11, 0, 11, 9, 3, 5, 2, 8}; {5, 1, 2, 6, 0, 2, -2, 6, -3, -4, 0, 0}, {3, -3, -4, -1, 3, -2, -5, -5, -1, 4, 0, 0}; {0, 0, 5, 2, 1, 2, 1, 9, 6, 10, 3, 8}; {0, 0, 5, 2, 1, 5, 2, 5, 0, 10, 0, 7}; {2, -4, -5, -1, 2, -4, -4, 4, -1, 1, 0, 0}; {5, 2, 4, -1, 5, 6, 1, 5, 5, -3, 0, 0}; { 5, 0, 0, 5, -4, 3, 5, 1, -3, 0, 0, 0}; {0, -3, -1, -5, 2, -3, -4, 3, -5, -2, 0, 0}; {0, -4, -3, 4, -2, -5, 1, 6, -5, -1, 0, 0}; {-3, -5, -2, -4, 4, -4, 1, 6, -4, 6, 0, 0); {3, 6, 2, 5, -5, 2, 2, 5, 5, 5, 0, 0}; {2,

-4, -5, 1, 1, -5, 2, 6, 1, 1, 0, 0 }; {-4, 2, 1, -4, -2, 3, -3, 6, -2, 0, 0, 0}; {-5, 4, 6, 4, -3, 0, -4, 2, 2, -4, 0, 0}; {-3, -1, 6, -3, 1, 0, 4, 2, -5, 3, 0, 0}; {-1, 4, 2, -3, -4, 0, 6, -2, 2, 0, 0, 0}; {-1, 0, 6, -3, 6, -2, 6, -1, -4, 6, 0, 0}; {-3, -1, 6, -2, 3, 1, 0, 55, 3, -2, 0, 0}; {-4, -1, -5, 1, 0, 5, 0, 3, 5, 4, 0, 0}; {0, -1, 3, 5, 4, -1, 4, 5, 0, 4, 0, 0}; {-1, -1, 4, -5, -4, 3, -2, 1, -3, 2, 0, 0}; {2, -4, 4, -1, 2, -3, -4, 4, -1, 2, 0, 0}; {-3, -5, -1, -5, 4, 3, -3, -1, 5, 2, 0, 0}; {-3, 1, -1, 1, 5, 1, 3, 5, 3, 4, 0, 0}; {-2, -3, 2, -1, 3, 4, -3, 2, 5, 2, 0, 0}; {-4, - 5, 0, -2, -4, -3, 3, 6, 2, -5, 0, 0}; {0, 0, 6, 5, 8, 6, 6, 8, 1, 6, 11, 7}; {-5, 5, -3, 6, -4, 1, -3, 1, 4, 6, 0, 0}; {-4, 1, 0, 5, 1, 4, -2, 4, 4, 1, 0, 0}; {6, -3, 6, -3, 3, 6, -5, -1, -5, 4, 0, 0}; {4, 2, 6, 4, 6, 0, -4, 0, 3, 6, 0, 0}; {-4, 2, 2, -4, 6, -1, 4, -1, 0, 0, 0, 0}; {-4, 6, -2, -3, 1, -5, 0, 3, 6, 3, 0, 0}; {0, 0, 6, 7, 5, 5, 0, 4, 6, 3, 10, 4}; {-4, -1, -4, 1, -3, 2, 3, -3, 4, 3, 0, 0}; {4, -5, 4, -3, 2, 4, -2, -4, 4, 0, 0, 0}; {-2, 4, 4, 1, -2, 3, 4, -4, 1, -2, 0, 0}; {4, -5, 4, -2, -2, 3, -2, 1, 4, 3, 0, 0}, {0, 0, 6, 9, 6, 10, 5, 9, 8, 1, 11, 9}; {0, 0, 6, 9, 11, 3, 11, 3, 0, 1, 9, 4}; {0, 0, 6, 10, 2, 1, 4, 0, 8, 8, 11, 8}; {-2, -3, 2, 6, 1, -5, -3, 3, 1, -2, 0, 0}; {6, 4, -3, 2, -2, 5, 5, -2, 0, 3, 0, 0}; {4, 2, -5, 0, -3, 6, 0, 2, -4, 0, 0, 0}; {3, 0, 4, -2, 0, 6, 0, -3, -5, -3, 0, 0}; {0, 0, 7, 5, 0, 9, 2, 9, 3, 6, 4, 5}; {-3, 5, -4, 2, 2, -2, 2, -1, -4, -3, 0, 0}; {-2, -3, 3, 1, -4, -3, 4, -4, 2, -2, 0, 0}; {-1, 6, -4, 2, -5, 3, 0, -4, -3, -2, 0, 0}; {-3, 2, 2, 6, -1, -5, 3, 3, 0, 3, 0, 0}; {0, 0, 7, 6, 9, 3, 3, 1, 3, 5, 1, 5}, {-3, -5, 0, -2, 2, 4, -3, 2, 5, 2, 0, 0}; {1 -3, 0, -4, 1, -2, -4, 4, -5, -3, 0, 0}; {3, 6, -2, -5, -4, 2, -2, 1, 4, 6, 0, 0}; {0, 0, 7, 8, 2, 1, 9, 4, 9, 7, 8, 10}; {0, 3, 1, 5, -2, 3, 4, -3, 5, 2, 0, 0} ; {-2, 4, 5, 1, -2, 4, 4, -4, 1, - 1, 0, 0}; {-5, 0, 0, -5, 4, -3, -5, -1, 3, 0, 0, 0}; {4, -1, 1, -2, 6, -3, -5, -1, -1, -5, 0, 0}; {-4, 0, -1, 6, 0, 1, -5, 3, 5, 1, 0, 0}; {0, 0, 7, 11, 5, 3, 6, 3, 0, 0, 4, 3}; {0, 0, -5, -1, 6, -4, 1, -3, 6, -1, 0, 0}; {0, 0, 7, 11, 10, 11, 4, 3, 7, 0, 8, 8}; {-4, 5, -2, 0, 6, -4, 5, 2, -3, 0, 0, 0 }; {0, 4, 4, 2, 2, -3, -1, 4, -2, -5, 0, 0}; {0, 0, 8, 3, 3, 2, 4, 10, 2, 0, 8, 0}; {2, 1, -4, 2, 3, -3, 3, 6, 4, -2, 0, 0}; {4, 2, -4, 2, 5, 1, 6, 5, 5, 6, 0, 0}; {1, -3, 1, 6, 6, -3, 1, 0, -2, 3, 0, 0}; {2, -1, 4, -1, 6, 5, 1, 2, -4, -1, 0, 0}; {4, 2, -4, 4, 1, 5, -4, 4, 6, 0, 0, 0}; {1, -3, 1, -4, 0, -3, -3, 0, 6, 6, 0, 0}; {-3, 5, -3, 4, -2, -4, 6, 4, -5, -4, 0, 0}; {-2, -5, 0, -4, 6, 5, -4, -1, 5, -3, 0, 0}; 0, 0, 8, 8, 0, 10, 8, 2, 7, 2, 9, 0}; {3, -3, -1, 5, 5, 1, 5, 1, -3, -1, 0, 0}; {-4, -5, 2, 1, 6, -3, 3, -3, 1, -1, 0, 0}; {0, 0, 8, 8, 2, 8, 3, 10, 2, 0, 2, 4}; {6, -2, -2, 2, 3, -2, 3, -3 3, 2, 0, 0}; {-5, 6, 1, 0, 2, -1, 4, -1, 2, -5, 0, 0}; {-2, 1, 0, 3, -3, -1, 5, -2, -5, 4, 0, 0}; {-3, 1, 1, 6, 3, -1, 4, 6, 3, 2, 0, 0}; {6, -1, 0, 6, 5, 4, 2, -3, 1, 0, 0, 0}; {-3, 3, 5, 0, -4, 1, -2, -4, -3, -4, 0, 0}; {-4, 0, 0, 6, 0, -5, -2, -4, -4, 5, 0, 0}; {0, 0, 8, 10, 0, 7, 2, 0, 4, 8, 6, 9}; {4, 1, 6, 5, -3, 5, -2, 2, 5, 2, 0, 0}; {0, 0, 8, 11, 9, 4, 11, 2, 6, 3, 5, 10} ; {0, 0, 9, 0, 5, 10, 10, 10, 3, 11, 5, 3}; {-4, 6, 1, 2, -4, 4, -3, -1, 2, -1, 0, 0}; {-1, 5, -4, 6, 1, 6, 4, -4, -3, 3, 0, 0}; {0, 0, 9, 2, 3, 1, 9, 1, 10, 5, 6, 9}; {3, 3, 0, 5, -5, 4, -3, 2, 1, 6, 0, 0}; {-5, 2, 6, --5, -4, -2, 4, -3, 5, 3, 0, 0}; {0, 0, 9, 3, 10, 3, 4, 1, 4, 9, 10, 1}; {-5, 4, -2, 2, -3, -1,3, 3, -1, -2, 0, 0}; {-2, -3, 5, -1, -2, 3, -4, 3, -5, 0, 0, 0}; {6, 5, 1, -5, -5, 0, 5, 1, 6, -1, 0, 0}; {5, 4, 0, -5, 3, -4, 2, 5, -4, 0, 0, 0}; {-1, 6, -2, 1, -3, -2, -5, 4, -5, -5, 0, 0}; {0, 0, 9, 5, 10, 0, 5, 1, 6, 6, 8, 4}; {3, -2, 2, 5, 5, 5, 6, 1, 6, 4, 0, 0}; {0, 0, 9, 5, 11, 11, 0, 4, 8, 3, 6, 7}; {-4, 3, -5, -1, -5, -4, 6, 4, -5, -5, 0, 0}; {3, -5, -4, -3, 3, -2, -5, 5, 0, 3, 0, 0}; {0, -5, -1, 4, 4, 0, 3, 1, -3, -3, 0, 0}; {0, 5, -5, -2, -1, -3, -4, 3, -3, 3, 0, 0}, {0, 0, 9, 8, 2, 5, 0, 6, 7, 11, 9, 2}; {-2, -2, -5, 6, 0, 5, -1, 4, -3, -3, 0, 0}; {2, -2, 3, -2, 4, 5, 2, 2, 5, 5, 0, 0}; {3, -3, 0, 6, 5, 1, 4, 1, -3, -2, 0, 0}; {2, -2, 3, -1, 6, 5, 1, 2, -4, -1, 0, 0}; {-5, -1, 0, 4, -2, 5, 2, 2, -2, 2,0, 0}; {4, -5, -5, -1, 4, -1, 2, 0, -2, 5, 0, 0}; {1, 3, 2, 6, 0, -5, -1, -1, 5, 3, 0, 0}; {-5, 2, 6, 3, 4, 6, -3, 6, 0, 0}; {6, -3, -2, 3, -3, 4, -3, -2, 6, 2, 0, 0}; {-4, 0, 2, -3, 3, 0, 4, 6, 3, 1, 0, 0}; {0, 0, 10, 1, 8, 1, 4, 5, 10, 10, 4, 1}; {-4, 2, 6, 3, 4, 6, -1, 0, -3, 6, 0, 0}; {3, -2, 3, 2, -3, 2, 4, 5, -5, 1, 0, 0}; {0, 0, 10, 2, 3, 8, 9, 10, 6, 1, 7, 0}; {2, -4, 0, -2, 6, 6, 1, -4, -2, 0, 0, 0}; (-1, -1, -3, 1, -5, 4, 1, -1, 5, -3, 0, 0}; {1, -4, 1, 0, 2, -2, 2, 5, -5, 4, 0, 0}; {4, -1, 4, 4, -1, 0, -4, 5, -2, 0, 0, 0}; {4, 0, 6, -5, 4, -5, -1, 4, 3, -2, 0, 0}; {1, 6, -3, -4, 2, 6, 2, -1, -2, 2, 0, 0}; {3, -1, 5, -5, 6, -1, 2, 1, 0, 4, 0, 0}; (0, 5, -4, -4, 1, 6, 1, -2, -3, 2, 0, 0}; {0, 0, 10, 5, 5, 10, 3, 9, 10, 10, 2, 9}; {5, 3, -1, 4, 4, -1, 4, -5, 5, -2, 0, 0}; {3, 0, -5, 0, -5, -2, 1, 0, 3, 4, 0, 0}; {1, -1, -5, 2, -4, -3, -2, 4, -4, 0, 0, 0}; {0, 0, 10, 7, 3, 8, 3, 7, 6, 8, 11, 4}, {-3, 4, -3, 1, 5, 2, -1, 0, -2, 4, 0, 0}; {-3, 6, 1, -5, 1, 1, -1, 2, 5, -1, 0, 0}; {5, -3, -1, 1, -2, 5, 2, 3, 0, 4, 0, 0}; {-5, 4, -1, 6, -3, 6, 5, 3, -5, -2, 0, 0}; {1, 0, -3, -4, 1, 5, -2, 5, -2, -3, 0, 0}; {0, 0, 10, 11, 0, 2, 6, 10, 8, 3, 10, 3}; {-2, 4, -4, 3, -4, -5, -1, -1, 3, 3, 0, 0}; 4, 2, -- 5, 2, --3, 6, 5, -2, 0, 2, 0, 0}, {-1, 6, 0, -4, -4, 2, 6, -4, -2, 1, 0, 0}; {0, 0, 11, 1, 3, 9, 8, 5, 1, 6, 0, 8}; {6, 1, 5, 4, 4, -1, 3, -5, -4, 0, 0, 0}, {-4, 2, -5, 3, 4, 6, 0, 0, -3, -5, 0, 0}; {0, 0, 11, 4, 1, 7, 8, 1, 3, 9, 0, 9}; {-1, 4, -4, -5, 1, 4, 2, -1, -3, 2, 0, 0}; {-1, 1, 2, -2, 2, -1, 3, -3, 6, 5, 0, 0}; {0, 0, 11, 6, 1, 0, 4, 7, 10, 5, 8, 4}; {-5, 2, -4, -2, 1, 3, -3, 5, 1, 1, 0, 0}; {-5, 3, -2, 1, -4, -1 , 3, 3, -1, -2, 0, 0}; {-4, 4, -1,3, -2, 1, 3, 2, 4, 5, 0, 0}; {3, -3, 2, 4, -3, 5, 3, 4, -1, -2, 0, 0}; (0, 0, 11, 7, 8, 4, 11, 10, 2, 2, 9, 2}; {5, 2, -2, 3, 1, 1, -4, -2, 5, -3, 0, 0}; 6, 3, -1, 5, -5, 3, 6, 5, 5, -2, 0, 0}; {1, -4, 2, 6, -4, 3, 1, 0, -2, -3, 0, 0}; {-5, 4, 0, -5, -5, 5, -5, 2, 5, -2, 0, 0}; {2, -1, -5, 2, 6, 3, 2, 2, -5, -2, 0, 0}; {0, 0, 11, 9, 4, 9, 3, 9, 3, 4, 8, 8}; {5, 1, -4, 2, -4, -1, 1, 0, 3, 4, 0, 0}; {6, 0, 5, -3, 5, 5, 5, 3, -3, -4, 0, 0}; {-5, 1, 6, 0, -4, 5, 5, -3, 0, 1, 0, 0}; {2, -2, 5, 1, 2, -3, 1, 6, -4, -1, 0, 0}; et {1, -4, 2, -3, -1, -2, -3, 0, 5, 6, 0, 0}; et

{0, 0, 0, 0, 3, 6, 0, 10, 6, 3, 8, 1}; {0, 0, 1, 3, 3, 9, 6, 2, 4, 11, 2, 9}; {0, 0, 3, 0, 9, 4, 3, 3, 9, 1, 8, 0}; {0, 0, 3, 1, 10, 11, 8, 2, 6, 1, 2, 7}; {0, 0, 3, 1, 11, 6, 7, 1,4, 11, 7, 11}; {0, 0, 3, 6, 10, 8, 8, 3, 11, 9, 0, 8}; {0, 0, 3, 7, 1, 4, 7, 6, 4, 0, 5, 2}; {0, 0, 4, 8, 8, 3, 9, 0, 7, 1, 10, 10}, {0, 0, 6, 5, 3, 5, 1, 5, 1, 8, 1, 2}; {0, 0, 6, 6, 1, 3, 4, 4, 5, 0, 6, 0}; {0, 0, 6, 8, 1, 3, 1, 4, 9, 5, 11, 8}; {0, 0, 7, 8, 8, 6, 2, 9, 6, 10, 3, 9}; {0, 0, 7, 8, 10, 9, 11, 2, 9, 1, 8, 4}; {0, 0, 8, 4, 4, 9, 3, 0, 5, 11, 2, 2}; {0, 0, 8, 5, 7, 10, 2, 10, 0, 11, 4, 11}; {0, 0, 8, 6, 9, 3, 11, 3, 4, 0, 4, 5}; {0, 0, 9, 1, 3, 9, 9, 9, 3, 0, 5, 0}; {0, 0, 10, 0, 7, 11, 7, 4, 11, 11, 2, 5}; {0, 0, 10, 11, 2, 7, 8, 2, 10, 2, 8, 4}; et {0, 0, 11, 6, 5, 0,8, 1, 0, 4, 10, 1}; et

l'unité de traitement est en outre configurée pour traiter le premier signal sur la base des N éléments dans la séquence $\{f_n\}$.

**8.** Appareil de traitement de signal selon la revendication 7, dans lequel l'unité émettrice-réceptrice est en outre configurée pour :

obtenir le premier signal sur les N sous-porteuses sur N sous-porteuses consécutives ; ou obtenir le premier signal sur les N sous-porteuses sur N sous-porteuses équidistantes.

**9.** Procédé de traitement de signal selon l'une quelconque des revendications 1 à 4 ou appareil de traitement de signal selon l'une quelconque des revendications 5 à 8, dans lequel le premier signal est un signal de référence, ou le premier signal est un signal utilisé pour transporter des informations de communication.

**10.** Procédé de traitement de signal selon l'une quelconque des revendications 1 à 4 et 9 ou appareil de traitement de signal selon l'une quelconque des revendications 5 à 9, dans lequel l'ensemble de séquences $\{S_n\}$ constitué d'un élément $S_n$ comprend au moins une première séquence dans un deuxième ensemble de séquences ou une séquence équivalente de la première séquence, et une seconde séquence dans le deuxième ensemble de séquences ou une séquence équivalente de la seconde séquence ;

le deuxième ensemble de séquences est l'un des ensembles suivants : un ensemble de séquences 1, un ensemble de séquences 2, un ensemble de séquences 3, un ensemble de séquences 4, un ensemble de séquences 5, un ensemble de séquences 6, un ensemble de séquences 7, un ensemble de séquences 8, un ensemble de séquences 9, un ensemble de séquences 10, un ensemble de séquences 11, un ensemble de séquences 12, un ensemble de séquences 13 et un ensemble de séquences 14 ;

les séquences dans l'ensemble de séquences 1 comprennent tout ou partie des séquences suivantes :

{6, 2, -3, -3, 3, -3, 1, 2, 4, 0, 0, 0}; {1, -4, 2, -3, -1, -2, -3, 0, 5, 6, 0, 0}; {5, -5, 0, 6, 3, -5, 5, -4, 6, 5, 0, 0}; {2, 1, 3, -4, 5, -2, 5, 0, 1, 5, 0, 0}; {-3, 2, 2, 6, -1, -5, 3, 3, 0, 3, 0, 0}, {-1, -3, 6, 0, 3, -1, 2, 3, 3, -4, 0, 0}; {-2, 2, 6, 6, -1, 5, 0, -1,-4, 1, 0, 0}; {-4, 4, 3, -2, 1, 5, -1, -4, -1, 0, 0}; {-1, 2, 4, 2, -4, -4, -1, -2, 4, 2, 0, 0}; {3, -3, 0, 6, 5, 1, 4, 1, -3, -2, 0, 0); {1, 4, -1, -3, -1, -4, 5, -2, -2, -5, 0, 0}; {-3, 5, -3, 4, -2, -4, 6, 4, -5, -4, 0, 0}; {-4, -5, 2, 1, 6, -3, 3, -3, 1, -1, 0, 0}, {4, -4, -3, 3, -3, 5, -4, -5, -5, 4, 0, 0}; {3, 6, -1, 5, 0, -2, 0, -2, -4, -5, 0, 0}; {5, 2, -2, 3, 1, 1, -4, -2, 5, -3, 0, 0}; {3, 0, 3, 3, -3, -1, -3, 5, -4, -1, 0, 0}; {3, 5, 0, 3, -4, 4, 2, -5, 5, -1, 0, 0}; {4, 2, -4, 4, 1, 5, -4, 4, 6, 0, 0, 0}; {2, -4, -5, 1, 1, -5, 2, 6, 1, 1, 0, 0}; {6, 1, 0, -2, 3, -5, -2, -3, 2, -2, 0, 0}; {-2, 1, 0, 3, -3, -1, 5, -2, 5, 4, 0, 0}; {-3, 1, -4, 3, 6, -2, 3, 5, 1, -1 , 0, 0}; {2, -3, 4, 4, -5, 6, -1, -1, 3, 5, 0, 0}; {1, -4, 1, 0, 2, -2, 2, 5, -5, 4, 0, 0}; -3, 1, -5, -2, -2, 3, -1, 6, 5, 1, 0, 0}; 5, 1, -4, 2, -4, -1, 1, 0, 3, 4, 0, 0}; {2, -4, 0, -2, 6, 6, 1, -4, -2, 0, 0, 0); {-3, 6, -2, -5, -4, 2, -2, 1, 4, 6, 0, 0}; et {-1, 6, 2, -2, 3, -4, 0, 3, 3, 3, 0, 0};

les séquences dans l'ensemble de séquences 2 comprennent tout ou partie des séquences suivantes :

{6, 2, 3, -3, 3, 3, 1, 2, 4, 0, 0, 0}; {6, 0, 5, 1, 0, 2, 0, 0, 5, 5, 0, 0}; {6, -3, 1, -5, -2, -5, 3, -4, 6, 1, 0, 0}; {-4, 2, 2, -4, 6, -1, 4, -1, 0, 0, 0, 0}; {-3, -5, -1, -5, 4, 3, -3, -1, 5, -2, 0, 0}; {-5, -2, 4, 4, -2, 3, 0, -2, -4, 0, 0, 0}; {-2, -3, 5, -1, -2, 3, -4, 3, -5, 0, 0, 0}; {4, 2, -4, 2, 5, 1, 6, 5, 5, 6, 0, 0}; {-2, -1, 1, -5, 3, 6, 2, 0, -1, 6, 0, 0}; {5, -4, 1, 6, 1, -1, 1, 0, 6, 3, 0, 0}; {-3, 5, 4, 3, -3, 2, 5, -5, 0, -3, 0, 0}; {0, 2, 5, -2, 5, 3, 3, -3, 4, 0, 0, 0}; {4, -1, 4, 4, -1, 0, -4, 5, -7 -, 0, 0, 0}; {6, 1, 5, 4, 4, -1, 3, -5, -4, 0, 0, 0}; {4, -1, 1, -2, 6, -3, -5, -1, -1, -5, 0, 0}; {3, -3, 2, 4, -3, 5, 3, 4, -1, -2, 0, 0}; {-3, 1, 1, 1, 5, 1, -3, 5, 3, 4, 0, 0}; {-5, 6, -3, -5, 3, -1, 2, -2, 3, 6, 0, 0}; {-3, 1, -3, 6, -4, 6, 5, -1, -5, -4, 0, 0}; {6, -2, -2, 2, 3, -2, 3, -3, 3, 2, 0, 0}; {-1, -5, 4, -4, 3, 5, 0, 6, -5, -1, 0, 0}, {-2, -3, 2, 6, 1, -5, -3, 3, 1, -2, 0, 0}; {-3, -5, 0, -2, 2, 4, -3, 2, 5, 2, 0, 0}; {4, -5, -5, -1, 4, -1, 2, 0, -2, 5, 0, 0}, {2, -1, -5, 2, 6, 3, 2, 2, -5, -2, 0, 0}; {3, 0, -5, 0, -5, -2, 1, 0, 3, 4, 0, 0}; {-1, 4, 1, -5, -3, 3, 4, -1, 0, -2, 0, 0}; {-5, 5, -3, 6, -4, 1, -3, 1, 4, 6, 0, 0}; --5, 4, -2, 2, -3, -1, 3, 3, -1, -2, 0, 0}; {0, 4, 0, -4, 2, -2, -2, 6, -4, 0, 0, 0}; les

séquences dans l'ensemble de séquences 3 comprennent tout ou partie des séquences suivantes :

6, 2, -3, -3, 3, -3, 1, 2, 4, 0, 0, 0}; {4, 5, 6, -2, 3, -1, 4, -1, -2, 4, 0, 0}; {2, -5, 3, -4, 3, 3, 6, -5, 4, 5, 0, 0}; {5, 1, 1, 6, -1, 2 -2, -5, -,3, 0, 0}; {0, 4, 4, 2, 2, -3, -1, 4, -2, -5, 0, 0}, {-5, 4, 0, -5, -5, 5, -5. 2, 5, -2, 0, 0}; {6, -4, 2, -4, -1, 4, 1, -5, 3, 0, 0, 0}; {-3, 5, -4, 2, 2, -2, 2, -1, -4, -3, 0, 0}; {-2, -3, 3, 1, -4, -3, 4, -4, 2, -2, 0, 0}; {3, -1, -3, 1, 2, 5, 3, -5, 1, 4, 0, 0}; {-1, 4, -4, -5, 1, 4, 2, -1, -3, 2, 0, 0}; (-3, 3, 5, 0, -4, 1, -2, -4, -3, -4, 0, 0}; {2, -4, 2, 1, 6, 4, -5, -1, 3, 1, 0, 0}; {3, -3, -4, -1, 3, -2, -5, -5, -1, 4, 0, 0}; {-5, 2, 6, 3, 4, 6, -1, 0, -3, 6, 0, 0}; {6, 6, -3, -5, 3, -2, 2, -4, 3, 5, 0, 0}; {4, -5, 0, -5, -4, 0, 2, 1, 5, 1, 0, 0}; {3, -2, 2, 5, 5, 5, 6, 1, 6, 4, 0, 0}; {0, 1, 6, -1, 6, 3, 4, -1, -2, 2, 0, 0}, {-3,-5, -2, -4, 4, 4, 1, 6, -4, 6, 0, 0}, {-3, -1, 6, -2, 3, 1, 0, 5, 3, -2, 0, 0}; {3, -5, 3, -1, -5, 6, 2, 5, -2, 0, 0, 0}; {3, 6, 2, 5, -5, 2, -2, 5, 5, 5, 0, 0}; {-4, 5, -2, 0, 6, -4, 5, 2, -3, 0, 0, 0}; {1, 3, 2, 6, 0, -5, -1, -1, 5, 3, 0, 0}; {4,-5, 4, -2, -2, 3, -2, 1, 4, 3, 0, 0}; {-1, -1, -3, 1, -5, 4, 1, 1, 5, -3, 0, 0}; {-3, 4, -3, 1, 5, 2, -1, 0, -2, -4, 0, 0}; {-5, 4, 6, 4, -3, 0, -4, 2, 2, -4, 0, 0}; et {3, -1, 5, -5, 6, -1, 2, 1, 0, 4, 0, 0};

les séquences dans l'ensemble de séquences 4 comprennent tout ou partie des séquences suivantes :

{0, -2, 4, 2, 4, 3, 4, 4, 4, 2, -5, -1}; {-2, -2, -5, 6, 0, 5, -1, 4, 3, 0, 0 {-1, 6, 0, -4, -4, 2, 6, -4, -2, 1, 0, 0}; {-2, 2, -2, 1, 5, -2, -2, 6, 4, -1, 0, 0}, {-4, 0, -1, 6, 0, 1, 5, 3, 5, 1,0, 0}; {6, 5, 1, -5, -5, 0, 5, 1, 6, -1, 0, 0}, {3, -4, 3, -4, 5, 5, 2, 2, -4, -3, 0, 0}; {5, -1, 6, 6, 5, 2, -5, 4, 6, -4, 0, 0}; {-4, 1, -5, 4, -4, -5, -4, -2, 5, 4, 0, 0}; {-1, 5, -4. 6, 1, 6, 4, -4, -3, 3, 0, ()}; {1, -5, 2, 1, 5, 0, 1, -3, -5, -4, 0, 0}; {-5, -2, 6, -5, -4, -2, 4, -3, 5, 3, 0, 0); {0, 0, 1, 6, 3, -1, 4, 6, 1, 5, 0, 0), {-4, -5, 0, -2, -4, -3, 3, 6, 2, -5, 0, 0}; {5, 1, 2, 6, 0, -2, -2, 6, -3, -4, 0, 0}; {3, -3, 2, 4, -3 5, 3, 4, -1,2, 0, 0}; {-4, -1, -5, 1, 0, 5, 0, 3, 5, 4, 0, 0}; {6, -3, -2, 3, -3, 4, -3, -2, 6, -2, 0, 0}; {-2, -3, 2, 6, 1, -5, -3, 3, 1, -2, 0, 0}; {-3, 6, 1, 5 1, 1 -1, 2, 5, -1, 0, 0}; {6, 1, -3, 3, -4, 0, 4, 6, 6, 5, 0, 0}; {-5, 1, -4, -5, -1, 5, -5, -5, -4, 2, 0, 0}; {4, -2, 6, 4, 6, 0, -4, 0, 3, 6, 0, 0}; {-5, -1, 0, 4, -2, 5, -2, -2, -2, 2, 0, 0}; {6, 3, -1, 5, -5, 3, 6, 5, 5, -2, 0, 0}; {1, -1, -5, 2, -4, -3, -2, 4, -4, 0, 0, 0}; {-1, 0, 3, 1, 0, -5, -2, 5, 1, 6, 0, 0}; {-3, 0, 6, 5, 0, 2, -4, 4, -1, -1, 0, 0}; {-4, 1, -4, 1, -3, 2, 3, -3, 4, 3, 0, 0}; et {0, -4, -5, -5, -2, 5, -4, -5, 1, 0, 0};

les séquences dans l'ensemble de séquences 5 comprennent tout ou partie des séquences suivantes :

{0, 0, 8, 7, 6, 0, 6, 4, 9, 5, 7, 10}; {0, 0, 5, 2, 1, 2, 1, 9, 6, 10, 3, 8}; {0, 0, 1, 3, 11, 7, 11, 4, 5, 0, 0, 7}; {0, 0, 10, 5, 5, 10, 3, 9, 10, 10, 2, 9}, {0, 0, 3, 4, 11, 1, 7, 10, 5, 11, 6, 3}; {0, 0, 4, 8, 6, 2, 2, 11, 3, 4, 0, 5}; {0, 0, 2, 10, 4, 0, 11, 9, 6, 0, 3, 5}; {0, 0, 9, 2, 3, 1, 9, 1, 10, 5, 6, 9}; {0, 0, 7, 11, 5, 3, 6, 3, 0, 0, 4, 3}; {0, 0, 8, 8, 0, 10, 8, 2, 7, 2, 9, 0}; {0, 0, 4, 10, 2, 4, 7, 6, 10, 7, 5, 3}, {0, 0, 5, 2, 1, 5, 2, 5, 0, 10, 0, 7}; {0, 0, 3, 3, 7, 1, 5, 3, 1, 11, 7, 11}; {0, 0, 9, 5, 11, 11, 0, 4, 8, 3, 6, 7}, {0, 0, 2, 11, 10, 4, 6, 9, 3, 8, 2, 9}; {0, 0, 9, 0, 5, 10, 10, 10, 3, 11, 5, 3}; {0, 0, 9, 8, 2, 5, 0, 6, 7, 11, 9, 2}; {0, 0, 1, 10, 1, 8, 11, 3, 2, 8, 7, 2}; {0, 0, 1, 6, 11, 3, 10, 7, 4, 11, 2, 1}; {0, 0, 11, 7, 8, 4, 11, 10, 2, 2, 9, 2}; 4, 8, 10, 3, 11, 4, 2, 2, 11, 6}, {0, 0, 6, 7, 5, 5, 0, 4, 6, 3, 10, 4}; {0, 0, 2, 7, 6, 4, 11, 8, 5, 9, 4, 7}; {0, 0, 7, 11, 10, 11, 4, 3, 7, 0, 8, 8}; {0, 0, 1, 5, 9, 2, 10, 3, 0, 8, 4, 4 {0,0, 0, 1, 10, 8, 5, 0, 4,9, 10, 2}; {0, 0, 9, 5, 10, 0, 5, 1, 6, 6, 8, 4}; {0, 0, 11, 4, 1, 7, 8, 1, 3, 9, 0, 9}; {0, 0, 1, 9, 0, 1, 6, 1, 8, 8, 5, 0}; et {0, 0, 8, 10, 0, 7, 2, 0, 4, 8, 6, 9}; les

séquences dans l'ensemble de séquences 6 comprennent tout ou partie des séquences suivantes :

{0, 0, 8,4, 6, 1, 9, 1, 1, 8, 0, 0}; {0, 0, 1, 9, 2, 5, 4, 8, 5, 1, 0, 6}; {0, 0, 10, 1, 8, 1, 4, 5, 10, 10, 4, 1}; 10, 0, 3, 6, 5, 2, 7,4, 3, 1, 7, 0}; {0, 0, 2, 11, 11, 5, 6, 2, 5, 10, 6, 1}; {0, 0, 3, 3, 11, 8, 5, 7, 3, 6, 11, 4}; {0, 0, 8, 11, 9, 4, 11, 2, 6, 5, 5, 10}; {0, 0, 11, 6, 1, 0, 4, 7, 10, 5, 8, 4}; {0, 0, 6, 10, 2, 1, 4, 0, 8, 8, 11, 8}; {0, 0, 10, 11, 0, 2, 6, 10, 8, 3, 10, 3}; {0, 0, 9, 3, 10, 3, 4, 1, 4, 9, 10, 1}; {0, 0, 7, 5, 0, 9, 2, 9, 3, 6, 4, 5}; {0, 0, 0, 4, 8, 11, 9, 6, 10, 5, 0, 11}; {0, 0, 11, 9, 4, 9, 3, 9, 3, 4, 8, 8}; {0, 0, 8, 3, 3, 2, 4, 10, 2, 0, 8, 0}; {0, 0, 3, 8, 2, 2, 9, 7,6, 2, 6, 3}; {0, 0, 4, 11, 11, 0, 1 1, 9, 3, 5,2, 8}; {0, 0, 6, 5, 8, 6, 6, 8, 1, 6, 11, 7}; {0, 0, 6, 9, 6, 10, 5, 9, 8, 1, 11, 9}; {0, 0, 11, 1, 3, 9, 8, 5, 1,6, 0, 8}; {0, 0, 7, 8, 2, 1, 9, 4, 9, 7, 8, 10}; {0, 0, 2, 0, 8, 9, 6, 10, 3, 9, 9, 2}; {0, 0, 4, 0, 6, 1, 9, 7, 6, 2, 5, 8}; {0, 0, 10, 7, 3, 8, 3, 7, 6, 8, 11,4}; {0,0, 10, 2, 3, 8, 9, 10, 6, 1, 7, 0}; {0, 0, 7, 6, 9, 3, 3, 1, 3, 5, 1, 5}; {0, 0, 4, 1, 8, 3, 5, 3, 2, 9, 11, 4}; {0, 0, 6, 9, 11, 3, 11, 3, 0, 1, 9, 4}; {0, 0, 3, 8, 10, 7, 4, 3, 8, 4, 8, 6};et {0, 0, 8, 8, 2, 8, 3, 10, 2, 0, 2, 4};

les séquences dans l'ensemble de séquences 7 comprennent tout ou partie des séquences suivantes :

{0, 4, -4, -2, 4, 3, 0, -4, -2, -4, -1, -3}; {-4, -1, 0, 5, -1, 6, -2, -2, -5, 3, 0, 0}; {-5, 5, -1, 1, -2, 3, -4, 1, 1, -3, 0, 0}, {-4, 2, -5, 3, 4, 6, 0, 0, -3, -5, 0, 0}; {-1, 5, 0, -5, 3, 2, 2, -5, -2, 1 0, 0}; {-5, 0, -5, 1, 3, -4, -4, 2, 1, 0, 0, 0}; {1, -3, 0, -4 1 -2, -4, 4, -5, 3 0, 0}; {-1, -3, 6, 0, 3, -1, 2, 3, 3, -4, 0, 0}; {1, 3, -3, 4, 6, -3, 2, 0, 5, 1, 0, 0}; {-2, 2, 6, 6, -1, 5, 0, -1, -4, 1, 0, 0}; {2, -4, 3, -5, -5, 5, -2, 0, 4, 4, 0, 0}; {3, 3, 0, 1, -5, 0, 6, 2, -4, -4, 0, 0}; {5, 3, -1, 4, 4, -1, 4, -5, 5, -2, 0, 0}; {3, 3, -5, -5, 1, -3, 3, -4, 2, 3, 0, 0}; -2, 4, 5, 1, -2, 4, 4, -4, 1, 1, 0, 0}; {5, 1, 0, 5, -2, 2, -3, 6, 2, 0, 0, 0}; { 5, -1 , 6, 0, 6, 6, 4, 4, 6, 5, 0, 0}; {3, 2, 4, -3, 6, -1, 5, 0, 1, 5, 0, 0}; {-5, 1, -5, 6, -1, 5, -5, 6, -5, 1,0, 0}; {2, -1, 4, -1, 6, 5, 1, 2, -4, -1, 0, 0}, {3, -3, 0, 6, 5, 1, 5, 2, -3, 2, 0, 0}; {2, -4, -5, -1, 2, -4, -4, 4, -1, 1, 0, 0 {-1, 3, -5, 1, -4, -3, -3, 4, 1, 2, 0, 0}; {-4, 1, 0, 5, 1, 4, -2, 4, 4, 1, 0, 0}; {-5, -2, 4, -5, 1, -5, 4, -4, 6, 0, 0, 0}, {-2, 4, -4, 3, -4, -5, -1, -1, 3, 3, 0, 0}; {1, -3, 1, -4, 0, -3 -3, 0, 6, 6, 0, 0}; {2, -2, 5, 1, 2, -3, 1, 6, -4, -1, 0, 0}; {1, -5, 1, -3, -5, -1, -1, 6, -5, 1, 0, 0};et {4, 6, -4, 4, -3, 6, 0, 6, 6, 3, 0, 0};

les séquences dans l'ensemble de séquences 8 comprennent tout ou partie des séquences suivantes :

{0, -3, -5, 2, -3, 1, -2, 1, -1, 2, 6, -4}; -5, 3, 5, 0, 5, 1, -1, 6, -4, -2, 0, 0}; {0, -2, 6, 0, -1, 3, -4, 3, -5, 0, 0, 0}; {-3, 0, 5, 0, -5, -3, -5, 3, 0, -2, 0, 0}; {-2, 4, 4, 1, -2, 3, 4, -4, 1, -2, 0, 0}; {-3, 0, 5, 2, -5, 3, -1-2 2, 2, 0, 0}; {5, -3, -1 , 1, -2, 5, 2, 3, 0, 4, 0, 0}; {1, 6, 0, -5, 4, -2, 0, 3, 3, 3, 0, 0}; {5, 0, 0, 5, -4, 3, 5, 1, -3, 0, 0, 0}; {0, 5, 4, -4, 1, 6, 1, -2, -3, 2, 0, 0}, {-3, -3, 5, -2, -1, -5, 1, 5, 3, -3, 0, 0}; {1, 6, 2, -4, -2, 0, -2, -1, 4, 3, 0, 0}; {-1, -4, 0, -4, -1, -1, 3, -5, -4, 4, 0, 0}; {3, 1, -4, -2, -4, 1, 6, -1, 0, -4, 0, 0}; {6, 0, 5, -3, 5, 5, 5, 3, -3, -4, 0, 0}; {-4, -1, 2, -4, 6, -2, -4, -5, -4, 3, 0, 0}; {6, 6, -2, -3, 4, -2, 5, -3, 3, 3, 0, 0}; {-3, 1, 1, 6, 3, -1, 4, 6, 3, 2, 0, 0}, {-5, 4, -1, 6, -3, 6, 5, 3, -5, -2, 0, 0}; {-4, 2, 6, 3, 4, 6, -1, 0, -3, 6, 0, 0}; {4, -2, 6, -3, -4, 6, 1, 0, 3, 6, 0, 0}; {-2, -5, 5, -4, 4, 6, 1, 6, -4, -4, 0, 0}; {4, -5, 4, -3, 2, 4, -2, -4, 4, 0, 0, 0}; {-4, -5, 0, -2, -4, 3, 3, 6, 2, -5, 0, 0}; {-4, 4, -1, 3, -2, 1, 3, 2, 4, 5, 0, 0}; {6, -1, 0, 6, 5, -4, 2, -3, 1, 0, 0, 0}; {-4, 2, -5,2, -3, 6, 5, -2, 0, 2, 0, 0}; {0, 3, 1, 5, -2, 3, 4, -3, 5, 2, 0, 0}; {-5, 4, 5, -1, 6, -5, 1, 5, 5, -2, 0, 0};et {0, -1, 3, 5, 4, 1, 4, 5, 0, 4, 0, 0};

les séquences dans l'ensemble de séquences 9 comprennent tout ou partie des séquences suivantes :

{0, 4, 0, -2, 1, -2, -4, 1, 2, 0, 5, -5); {1, 4, -1, 4, 3, 0, -2, 6, 2, 0, 0, 0}; {0, -5, -1, 4, 4, 0, 3,1, -3, -3, 0, 0}; {1, 6, -1, -4, 2, 6, 2, -1, -2, 2, 0, 0}; {5, 3, 1, 5, 1, 3, -2, 5, 6, -3, 0, 0}; 2, -2, 3, -2, 4, 5, 2, 2, 5, 5, 0, 0}; 4, -5, 0, 4, 2, 6, 3, -4, 6, 4, 0, 0}; {3, -2, 5, -2, 0, -2, -3, 3, 3, -2, 0, 0}; {-1, 6, 3, 1, 6, 1, -2, 0, -5, -1, 0, 0}; {-1, 2, -4, 2, -4, 6, 1, 2, -2, -2, 0, 0}; {-5, 3, 2, 5, 3, 0, 4, -3, 5, -4, 0, 0}; {1, 0, -3, -4, 1, 5, -2, 5, -2, -3, 0, 0}; {-4, 0, 0, 6, 0, -5, -2, -4, -4, 5, 0, 0}; {6, 4, -3, 2, -2, 5, 5, -2, 0, 3, 0, 0}; {-4, 6, -2, -3, 1, -5, 0, 3, 6, 3, 0, 0}; {-4, 2, 1, -4, -2, 3, -3, 6, -2, 0, 0, 0}; {4, -2, 6, -3, -4, 6, 1, 0, 3, 6, 0, 0}, {6, -3, 6, -3, 3, 6, -5, -1, -5, 4, 0, 0 {-5, 6, -5, 3, -1, 2, --2, 3, 6, 0, 0 {4, 0, 6, -5, 4, -5, 4, 3, -2, 0, 0}; {-5, 2, 6, -5, -4, -2, 4, -3, 5, 3, 0, 0}; {-3, 1, 5, 0, -5, -3, -4, 3, 0, -2, 0, 0}; {0, 5, -5, -2, -1, -3, -4, 3, -3, 3, 0, 0}; {6, 3, 4, 0, 6, 4, -2, 4, 6, -2, 0, 0}; {-5, -4, 6, 3, 6, -1, 5, 5, -2, -5, 0, 0}; {-3, 2, -5, 0, -1, -3, -5, 5, -3, -4, 0, 0}; {4, 2, -5, 0, -3, 6, 0, 2, -4, 0, 0, 0}; {-1, 6, 5, 4, -2, 1, -2, 0, 1, -4, 0, 0}; {-4, 0, 5, 2, -3, -4, 4, -2, 1, 1, 0, 0};et {-5, 6, 1, 0, 2, -1, 4, -1, 2, -5, 0, 0};

les séquences dans l'ensemble de séquences 10 comprennent tout ou partie des séquences suivantes :

{6, 0, 6, 0, 4, -5, -4, 2, 0, 2, 0, 0}; {2, -4, 3, 5, -5, 5, -1, 0, 3, 4, 0, 0}; {-4, 0, 4, 3, -2, 3, -1, -2, -5, 0, 0, 0}; {0, 4, -2, 4, -3, -4, -11, -2, 6, 5, 0, 0}; {3, 0, 4, -2, 0, 6, 0, -3, -5, -3, 0, 0}; {-1, 0, 3, 4, -1, -5, 2, -5, 2, 3, 0 0}; {-1, -1, 1, -4, 6, -3, 3, -2, -1, 5, 0, 0}; {-1, 6, -4, 2, -5, 3, 0, -4, -3, -2, 0, 0}; {6, 3, 1, 5, -1, 0, -1 , 6, -3, 0, 0, 0}; {3, -2, 3, 2, -3, 2, 4, 5, -5, 1, 0, 0}; {-5, 0, 0, -5, 4, -3, -5, -1, 3, 0, 0, 0}; {3, -3, 5, 2, 2, -3, 1, -5, -3, -1, 0, 0}; {-2, -3, 2, -1, 3, 4, 3, 2, 5, 2, 0, 0}; {-2, 3, -4, 4, 5, 6, 1, 1, -3, -5, 0, 0 {2, 1, -4, 2, 3, -3, 3, 6, 4, -2, 0, 0}; {-4, 0, 2, -3, 3, 0, 4, 6, 3, 1, 0, 0}; {0, 3, 1, 5, -2, 3, 4, -3, 5, 2, 0, 0}; {-1, 2, -5, 0, -5, 0, 3, 2, 4, 6, 0, 0}; {-5, 3, -2, 1, -4, -1, 3, 3, -1, -2, 0, 0}; {-4, 3, -5, -1, -5, -4, 6, 4, -5, -5, 0, 0}; {-4, -1, 2, -4, 6, -2, -4, -5, -4, 3, 0, 0}; {2, -4, -4, -1, 2, -3, -4, 4, -1, 2, 0, 0}; {-1, -1, 4, -5, -4, 3, -2, 1, -3, 2, 0, 0}; {4, 0, -4, 2, 1, 4, -4, 3, 5, 0, 0, 0}; {4, -5, 4, -3, 2, 4, -2, -4, 4, 0, 0, 0}; {-2, -5, 0, -4, 6, 5, -4, -1, 5, -3, 0, 0}; {0, -4, -3, 4, -2, -5, 1, 6, -5, -1, 0, 0}; {-5, -1, -5, -2, 4, -1, -4, 4, 5, 6, 0, 0}; {-4, 3, 1, 0, 6, 6, - 1, 3, -1, -1, 0, 0};et {-1, 1, 2, -2, 2, -1, 3, -3, 6, 5, 0, 0};

les séquences dans l'ensemble de séquences 11 comprennent tout ou partie des séquences suivantes :

{6, 0, 6, 0, 4, -5, 4, 2, 0, -2, 0, 0}; {-2, 1, -4, -4, 4, -4, 3, -1, -4, -2, 0, 0}; {5, 2, 4, -1, 5, 6, 1, 5, 5, -3, 0, 0}; {3, 3, 0, 5, -5, 4, -3, 2, 1, 6, 0, 0}; {-5, 1, 6, 0, -4, 5, 5, -3, 0, 1, 0, 0}; {-1, 4, 2, -3, -4, 0, 6, -2, 2, 0, 0, 0}, {-4, 6, 1, 2, -4, 4, -3, -1, 2, -1, 0, 0}; {3, 6, -1, -2, 3, -5, 3, 1, -2, 2, 0, 0}; {0, 0, 1, 6, 3, -1, 4, 6, 1, 5, 0, 0}; {5, -1, 5, -2, 0, 0, -1, 0, -4, 6, 0, 0}; {-4, 1, 6, 1, -2, 6, 0, 2, 4, 3, 0, 0}; {-5, -5, -5, 2, 6, -2, 6, 4, -3, 6, 0, 0}; {1, -3, 1, 6, 6, -3, 1, 0, -2, 3, 0, 0}; {0, -3, -1, -5, 2, -3, -4, 3, -5, -2, 0, 0}; {-5, 2, -4, -2, 1, 3, 5, 1, 1, 0, 0}; {0, 3, 1, 5, -2, 3, 4, -3, 5, 2, 0, 0}; {-1, 6, -2, 1, -3, -2, -5, 4, -5, -5, 0, 0}; {2, -2, -3, -5, 0, 5, -4, -4, -1, -3, 0, 0}; {1, -4, 2, 6, -4, 3, 1, 0, -2, -3, 0, 0}; {2, 4, -5, 1, 5, 0, -5, 5, 3, -1, 0, 0}; {-3, -1, 6, -3, 1, 0, 4, 2, -5 , 3, 0, 0}; {3, 5, -4, -3, 3, -2, -5, 5, 0, 3, 0, 0}; {5, 4, 0, -5, 3, -4, 2, 5, -4, 0, 0, 0}; {-1, 0, 6, -3, 6, -2, 6, -1, -4, 6, 0, 0}; {3, -3, -1, 5, 5, 1, 5, 1, -3, -1, 0, 0}; {4, 1, 6, 5, -3, 5, -2, 2, 5, 2, 0, 0}, {0, 0, -5, -1, 6, -4, 1, -3, 6, -1, 0, 0}; {-2, -4, 6, 0, 5, -3, -5, 3, -4, -1, 0, 0}; {2, -2, 3, -1, 6, 5,

1, 2, -4, -1, 0, 0}; et {-3, 1, -3, 6, -4, 6, 5, -1, -5, -4, 0, 0};

les séquences dans l'ensemble de séquences 12 comprennent tout ou partie des séquences suivantes :

{0, 0, 11,6, 7, 7, 10, 4, 9, 9, 3, 10}; {0, 0, 7, 4, 9, 6, 3, 3, 4, 9, 3, 6}; {0, 0, 2, 5, 1, 2, 10, 10, 6, 1, 7, 4}; {0, 0, 1, 3, 3, 9, 6, 2, 4, 11, 2, 9}; {0, 0, 10, 0, 7, 11, 7, 4, 11, 11, 2, 5}; {0,0, 7, 8, 10, 9, 11, 2, 9, 1, 8, 4}, {0, 0, 11, 8, 9, 3, 9, 0, 9, 2, 1, 6}; {0, 0, 11, 4, 1, 0, 7, 1, 6, 6, 10, 2}; {0, 0, 4, 8, 8, 3, 9, 0, 7, 1, 10, 10}; {0, 0, 10, 11, 2, 7, 8, 2, 10, 2, 8, 4}; {0, 0, 3, 1, 11, 6, 7, 1, 4, 11, 7, 11}; {0, 0, 6, 6, 1, 3, 4, 4, 5, 0, 6, 0}; {0, 0, 8, 4, 4, 9, 3, 0, 5, 11, 2, 2}; {0, 0, 5, 4, 2, 0, 2, 0, 7, 1, 6, 9}; {0, 0, 1, 4, 7, 3, 1, 3, 9, 3, 0, 9}; {0, 0, 8, 6, 9, 3, 11, 3, 4, 0, 4, 5}; {0, 0, 0, 0, 3, 6, 0, 10, 6, 3, 8, 1}; {0, 0, 3, 1, 10, 11, 8, 2, 6, 1, 2, 7}; {0, 0, 3, 7, 1, 4, 7, 6, 4, 0, 5, 2}; {0, 0, 8, 5, 7, 10, 2, 10, 0, 11, 4, 11}; {0, 0, 3, 6, 10, 8, 8, 3, 11, 9, 0, 8}; {0, 0, 3, 0, 9, 4, 3, 3, 9, 1, 8, 0}; {0, 0, 2, 5, 3, 1, 5, 0, 0, 9, 3, 8}; {0, 0, 6, 5, 3, 5, 1, 5, 1, 8, 1, 2}; {0, 0, 11, 6, 5, 0, 8, 1, 0, 4, 10, 1}; {0, 0, 7, 7, 11, 8, 7, 11, 7, 0, 9, 0}; {0, 0, 11, 9, 4, 4, 6, 9, 5, 11, 4, 7}; {0, 0, 9, 1, 3, 9, 9, 9, 3, 0, 5, 0}; {0, 0, 6, 8, 1, 3, 1, 4, 9, 5, 11, 8}; et {0, 0, 7, 8, 8, 6, 2, 9, 6, 10, 3, 9};

les séquences dans l'ensemble de séquences 13 comprennent tout ou partie des séquences suivantes :

{0, 0, 0, 5, 3, 2, 11, 4, 10, 10, 3, 8}; {0, 0, 8, 7, 6, 8, 11, 2, 8, 3, 11, 4}; {0, 0, 11, 8, 5, 9, 11, 9, 3, 9, 0, 3}; {0, 0, 3, 5, 8, 4, 2, 11, 4, 0, 3, 11}; {0, 0, 4, 7, 7, 1, 7, 10, 5, 10, 8, 7}; {0, 0, 4, 0, 1, 6, 11, 4, 2, 4, 11, 9}, {0, 0, 0, 3, 6, 1, 0, 1, 7, 1, 9, 6}; {0, 0, 2, 3, 10, 7, 11, 7, 6, 0, 3, 9}; {0, 0, 9, 10, 4, 9, 3, 11, 5, 5, 9, 9}; {0, 0, 0, 3, 9, 10, 8, 2, 6, 2, 11, 6}; {0, 0, 4, 1, 11, 7, 8, -1, 5, 0, 8, 11}; {0, 0, 1, 0, 4, 0, 8, 8, 3, 3, 8, 0}; {0, 0, 7, 6, 7, 7, 4, 10, 8, 1,6, 11}; {0, 0, 2, 7, 1, 3, 10, 10, 6, 2, 7, 5}; {0, 0, 11, 7, 0, 10, 3, 6, 8, 3, 9, 11}; {0, 0, 7, 8, 11, 10, 11, 2, 8, 2, 8, 4}; {0, 0, 1, 0, 7, 11, 11, 7, 4, 0, 3, 8}; {0, 0, 11, 5, 6, 1, 1,5,3, 11, 5, 11}; {0, 0, 11, 3, 0, 4, 0, 8, 8, 1, 4, 8}; {0, 0, 0, 7, 8, 8, 0, 7, 0, 0, 7, 1}; {0, 0, 7, 7, 4, 6, 7, 6, 11, 7, 2, 7}; {0, 0, 1, 0, 5, 10, 4, 8, 7, 2, 1, 8}; {0, 0, 11, 8, 6, 1, 9, 2, 1, 5, 10, 2}, {0, 0, 5, 5, 1, 3, 8, 0, 7, 2, 7, 5}, {0, 0, 0, 10, 6, 8, 2, 1, 6, 6, 1, 7}; {0, 0, 2, 6, 4, 5, 1, 3, 3, 3, 1, 8}; {0, 0, 10, 8, 6, 1, 6, 9, 4, 9, 8, 0}; {0, 0, 2, 5, 9, 7, 6, 3, 6, 1, 8, 5}; {0, 0, 0, 11, 8, 0, 5, 0, 2, 7, 6, 0};et {0, 0, 4, 3, 11, 9, 8, 10, 7, 2, 7, 0}; et

les séquences dans l'ensemble de séquences 14 comprennent tout ou partie des séquences dans un ensemble d'union des séquences dans le premier ensemble de séquences et les séquences suivantes :

{0, 0, 8, 7, 6, 0, 6, 4, 9, 5, 7, 10}; {0, 5, 6, 0, 7, 0, 11, 1, 4, 2, 0, 0}; {0, 7, 2, 0, 9, 10, 7, 10, 1, 2, 5, 10}; {0, 2, 0, 1, 0, 4, 7, 9, 3, 2, 11, 6}; {0, 10, 8, 5, 6, 0, 4, 6, 5, 9, 6, 11}; {0, 4, 4, 4, 10, 9, 9, 5, 9, 8, 4, 8}; {0, 9, 8, 1, 11, 11, 1, 6, 10, 7, 1, 5}; {0, 1, 3, 2, 11, 11, 5, 6, 0, 6, 0, 9}; {0, 7, 3, 1, 7, 8, 10, 3, 0, 2, 11, 1}; {0, 11, 1, 2, 3, 10, 8, 3, 8, 2, 4, 0}; {0, 10, 1, 10, 3, 10, 8, 7, 1, 3, 8, 11}; {0, 3, 10, 7, 5, 1, 5, 10, 1, 1, 3, 1}; {0, 3, 9, 11, 9, 7, 5, 10, 8, 0, 10, 1}; {0, 1, 3, 5, 2, 1, 2, 9, 2, 9, 9, 4}; {0, 7, 2, 2, 7, 2, 5, 5, 8, 2, 2, 1}; {0, 9, 0, 7, 9, 8, 0, 3, 4, 0, 6, 5}; 0, 7, 2, 6, 4, 1, 9, 10, 5, 7, 8, 9}; {0, 5, 11, 10, 1, 8, 7, 6, 0, 11, 10, 2}; {0, 11, 1, 3, 2, 1, 8, 10, 3, 8, 5, 0}; {0, 5, 11, 3, 2, 8, 3, 4, 6, 5, 1, 0}; 10, 6, 8, 0, 8, 7, 0, 10, 0, 7, 5, 7}, {0, 3, 6, 4, 8, 5, 3, 2, 8, 0, 3}; {0, 1, 0, 9, 6, 1, 3, 9, 3, 9, 9, 0}; {0, 3, 0, 2, 7, 11, 11, 2, 10, 6, 3, 3}; {0, 5, 8, 8, 9, 7, 9, 4, 1, 10, 6, 10}; {0, 6, 7, 6, 0, 1, 10, 1, 1, 9, 1, 11}; {0, 10, 6, 6, 2, 4, 5, 11, 4, 1, 4, 5}; {0, 6, 4, 2, 9, 11,0, 9, 11, 7, 9, 10, 3 }; {0, 9, 2, 2, 1, 10, 0, 4, 5, 0, 5}; {0, 3, 11, 8, 3, 4, 9, 11, 0, 11, 1, 8}; {0, 5, 10, 3, 7, 4, 2, 3, 11, 9, 2, 1}; {0, 11, 8, 0, 9, 7, 11, 1, 0, 5, 8,3}, {0, 4, 9, 2, 1, 5, 4, 8, 6, 4, 2, 1}; {0, 1, 10, 9, 11, 11, 4, 2, 9, 4, 7, 1}; {0, 1, 0, 11, 1, 6, 6, 0, 0, 7, 2, 8}; {0, 6, 1, 9, 3, 4, 10, 11, 6, 6, 5, 7}; {0, 3, 11, 2, 7, 9, 9, 11, 8, 4, 0, 10}; {0, 8, 4, 10, 7, 11, 1, 0, 5, 7, 3, 4}; {0, 1, 5, 6, 5, 5, 2, 5, 11, 5, 2, 9}; {0, 9, 6, 7, 2, 10, 3, 5, 8, 5, 6, 8}; {0, 11, 0, 11, 9, 1, 5, 5, 10, 0, 7, 2}; {0, 0, 0, 7, 8, 9, 1, 7, 0, 0, 8, 2}; {0, 0, 9, 10, 0, 5, 4, 11, 7, 11, 4, 11}; {0, 1, 5, 2, 7, 6, 0, 6, 8, 6, 3, 4}, {0, 7, 4, 9, 2, 3, 10, 8, 9, 11, 10, 10}; {0, 8, 10, 5, 10, 6, 4, 11, 1, 3, 5, 5}; {0, 0, 10, 4, 4, 2, 4, 9, 1, 0, 5, 11}; {0, 7, 11, 2, 11, 10, 10, 4, 3, 6, 5, 11}; {0, 10, 11, 1, 9, 3, 8, 7, 1, 3, 9, 8}; {0, 8, 3, 5, 10, 10, 1, 5, 2, 2, 4, 1}; {0, 4, 0, 10, 1, 10, 8, 1, 2, 0, 5, 7}; {0, 7, 4, 2, 11, 1, 6, 9, 9, 0, 9, 0}; {0, 1, 9, 11, 3, 2, 4, 8, 4, 11, 7, 2}; {0, 10, 10, 7, 3, 8, 6, 9, 11, 5, 10, 0}; {0, 6, 3, 9, 9, 11, 11, 9, 9, 3, 6, 0}; {0, 10, 8, 7, 0, 11, 7, 10, 0, 5, 1, 5}; {0, 7, 2, 6, 6, 1, 9, 11, 2, 1, 10, 11 }; {0, 10, 4, 2, 8, 9, 8, 8, 8, 2, 7, 11}; {0, 0, 8, 7, 8, 11, 4, 10, 2, 0, 6, 2}; {0, 10, 6, 6, 11, 2, 7, 2, 7, 5, 7, 7}; {0, 5, 3, 8, 5, 8, 0, 5, 7, 5, 3, 2}; {0, 10, 9, 8, 1, 11, 4, 1, 6, 9, 1, 6}; {0, 0, 0, 11, 3, 8, 2, 7, 5, 0, 11, 5}; {0, 1, 1, 4, 2, 8, 3, 0, 1, 8, 10, 4}; {0, 9, 7, 2, 9, 1, 10, 11, 11, 2, 6, 8}; {0, 10, 7, 10, 6, 3, 9, 1, 4, 2, 5, 7}; {0, 6, 11, 6, 1, 0, 5, 6, 9, 9, 7, 7}; {0, 3, 1, 3, 4, 6, 0, 3,0, 9, 7, 2}; {0, 4, 2, 6, 6, 0, 4, 7, 3, 2, 1, 10}; {0, 11, 6, 2, 1, 11, 1, 8, 1, 6, 6, 9}; {0, 1, 0, 11, 5, 5, 11, 0, 5, 0, 7, 0}; {0, 4, 7, 9, 1, 9, 1, 10, 2, 0, 10, 7}; {0, 2, 6, 8, 9, 4, 11, 2, 10, 3, 1, 11}; {0, 0, 11, 6, 7, 7, 10, 4, 9, 9, 3, 10}; {0, 8, 4, 0, 4, 11, 1, 9, 10, 10, 0, 3}; {0, 4, 10, 4, 8, 8, 1, 0, 5, 3, 1, 1}; {0, 0, 8, 1, 2, 10, 4, 8, 6, 0, 3, 3}; {0, 3, 6, 3, 6, 10, 7, 3, 7, 5, 2, 3}; {0, 5, 7, 11, 7, 2, 3, 2, 7, 4, 5,4}; {0, 0, 4, 7, 11, 7, 6, 3, 9, 6, 9, 6}; {0, 3,6, 9, 3, 2, 11, 6, 9, 7, 9, 7}; {0, 8, 4, 5, 0, 7, 0, 1, 4, 0, 2, 3}; {0, 10, 3, 0, 4, 5, 10, 3, 5, 2, 11, 0}; {0, 0, 4, 3, 9, 5, 3, 4, 0, 3, 9, 1}; {0, 6, 1, 3, 3, 8, 3, 4, 6, 4, 0, 0}, {0, 3, 11, 2, 6, 7, 6, 4, 3, 9, 6, 2}; {0, 1, 2, 10, 9, 3, 1, 11, 3, 8, 3, 8}; {0, 3, 2, 2, 9, 7, 6, 1, 5, 5, 10, 4}; {0, 4, 5, 7, 2, 9, 6, 6, 1, 5, 2, 2}; {0, 6, 0, 1, 8, 3, 1, 1, 1, 7, 8, 9}; {0, 10, 8, 8, 7, 0, 10, 3, 0, 4, 8, 1}; {0, 4, 8, 10, 4, 3, 0, 8, 10, 8, 11, 9}; {0, 10, 10, 8, 6, 9, 0, 11, 3, 4, 10, 4}; {0, 10, 6, 2, 6, 3, 5, 2, 6, 9, 1, 3}; {0, 9, 7, 5, 10, 7, 11, 8, 11, 1, 5, 9}, {0, 8, 4, 7, 1, 2, 7, 0, 11, 11, 1, 1}; {0, 11, 10, 4, 5, 5, 7, 1, 6, 5, 11, 5}; {0, 8, 7, 6, 1, 10, 2, 1, 3, 5, 11, 3}; {0, 8, 3, 6, 4, 0, 11, 1, 2, 10, 1, 4}; {0, 9, 1, 10, 4, 1, 1, 10, 1, 4, 8, 9}; {0, 7, 0, 5, 10, 10, 4, 3, 10, 10, 11, 10}; {0, 11, 3, 3, 6, 3, 2, 1, 9, 2, 6, 11}; {0, 11, 10, 8, 9, 0, 0, 5, 4, 10, 4, 9}; {0, 1, 11, 1, 3, 9, 9, 4, 2, 6, 0, 8}; {0, 8, 2, 10, 7, 10, 1, 8, 10, 3, 3, 3}; {0, 7, 2, 10, 2, 2, 3, 6, 1, 2, 10, 10}; {0, 1, 10, 10, 1, 3, 0, 7, 7, 0, 7, 2}; {0, 1, 8, 9, 6, 9, 10, 10, 3, 11, 7, 1}; {0, 8, 4, 5, 11, 6, 11, 0, 2, 10, 11, 0}; {0, 5, 5, 6, 10, 1, 8, 8, 6, 5, 9, 5}; {0, 8, 9, 5, 4, 10, 5, 2, 5, 5, 6, 9}, {0, 7, 5, 2, 11, 2, 7, 10, 11, 1, 11, 2}; {0, 3, 6, 11, 0, 8, 6, 5, 8, 5, 10, 7}; {0, 2, 4, 0, 4, 2, 7, 1, 11, 10, 6, 5}; {0, 10, 8, 5, 5, 10, 2, 4, 2, 6, 3, 7}; {0, 8, 7, 3, 0, 1, 3, 0, 3, 2, 7, 0}; {0, 9, 6, 5, 9, 6, 1, 3, 4, 8, 3, 6}; {0, 10, 10, 5, 1, 6, 4, 3, 7, 0, 3, 5}, {0, 11, 10, 7, 11, 10, 11, 5, 0, 4, 5, 10}; et {0, 3, 4, 9, 6, 9, 10, 5, 11, 9, 9, 6}.

**11.** Support de stockage lisible par ordinateur, configuré pour stocker une instruction informatique, dans lequel, lorsque l'instruction informatique est utilisée pour mettre en œuvre le procédé de traitement de signal selon les revendications 1 à 4 et les revendications 9 à 10.

FIG. 1

FIG. 2

Map a sequence including N elements to N subcarriers to obtain an N-point frequency domain signal S301

Convert the N-point frequency domain signal into a time domain signal, and add a cyclic prefix to the time domain signal to generate a first signal S302

Send the first signal at a radio frequency S303

FIG. 3

| | |
|---|---|
| $f_0$ | Subcarrier s+0 |
| $f_1$ | Subcarrier s+1 |
| $f_2$ | Subcarrier s+2 |
| $f_3$ | Subcarrier s+3 |
| $f_4$ | Subcarrier s+4 |
| $f_5$ | Subcarrier s+5 |
| $f_6$ | Subcarrier s+6 |
| $f_7$ | Subcarrier s+7 |
| ⋮ | ⋮ |
| $f_{N-3}$ | Subcarrier s+N−3 |
| $f_{N-2}$ | Subcarrier s+N−2 |
| $f_{N-1}$ | Subcarrier s+N−1 |

FIG. 4a

FIG. 4b

Locally stored sequence $\{f'_n\}$

Received sequence $\{f_n\}$

Perform related processing and maximum likelihood comparison

FIG. 5

Processing unit 601 ——— Transceiver unit 602

Sequence-based signal processing apparatus 600

FIG. 6

Sequence-based signal processing apparatus 700

Processor 701

Transceiver 703

Memory 702

FIG. 7

FIG. 8

FIG. 9

FIG. 10

**REFERENCES CITED IN THE DESCRIPTION**

**Non-patent literature cited in the description**

- **HUAWEI et al.** *Short PUCCH for UCI of up to 2 bits,* 08 October 2017, vol. RAN WG1 (Prague
- *3GPP DRAFT; R1-1717066, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,* 08 October 2017, http://www.3gpp.org/ftp/Meetings_3GPP_SYNC/RAN 1/Docs

- **HUAWEI et al.** *Short PUCCH for UCI of up to 2 bits,* 08 October 2017, vol. RAN WG1